(19) Europäisches Patentamt
European Patent Office
Office européen des brevets

(11) EP 1 244 006 A1

(12) # EUROPEAN PATENT APPLICATION
published in accordance with Art. 158(3) EPC

(43) Date of publication:
**25.09.2002 Bulletin 2002/39**

(21) Application number: **00939103.8**

(22) Date of filing: **20.06.2000**

(51) Int Cl.[7]: **G06F 9/06**, G06F 9/44

(86) International application number:
**PCT/JP00/04008**

(87) International publication number:
**WO 00/079385 (28.12.2000 Gazette 2000/52)**

(84) Designated Contracting States:
**AT BE CH CY DE DK ES FI FR GB GR IE IT LI LU MC NL PT SE**

(30) Priority: **21.06.1999 JP 17473099**

(71) Applicants:
- **The Institute of Computer Based Software Methodology and Technology Minatu-ku, Tokyo 108-0074 (JP)**
- **Information System Development Institute Tokyo 108-0074 (JP)**

(72) Inventor: **NEGORO, Fumio**
**Kamakura-shi, Kanagawa 248-0001 (JP)**

(74) Representative: **Midgley, Jonathan Lee**
**Marks & Clerk**
**57-60 Lincoln's Inn Fields**
**GB-London WC2A 3LS (GB)**

(54) **METHOD FOR DETERMINING SOFTWARE AND PROCESSOR**

(57) By deleting logic from the software development work, making operational process logic unnecessary, obtaining requirements and software at the same time, and for providing a revolutionary solution to the problem concerned with traditional software, a desired software and its requirement is decided by solving the Scenario Function that is a theoretical conclusion of Logical Atomism. Specifically, the Definitive such as Screen, File et al is defined and the Homogeneity Map is created as well, in which the three components of the Scenario Function, i.e., W02, W03 and W04 Pallets are placed in accordance with a rule in which semantic quality embodies linearly. Thereafter, the Tense Control Vector with a prescribed structure to determine the semantic quality for every word is made into program for every word belonging to the Definitive. Characteristics of specific work are reflected in the Self Creation logic contained in the Tense Control Vector. By operating programs obtained in this manner in accordance with a rule of the Synchronous Structure, the business operational requirements are satisfied

FIG. 25

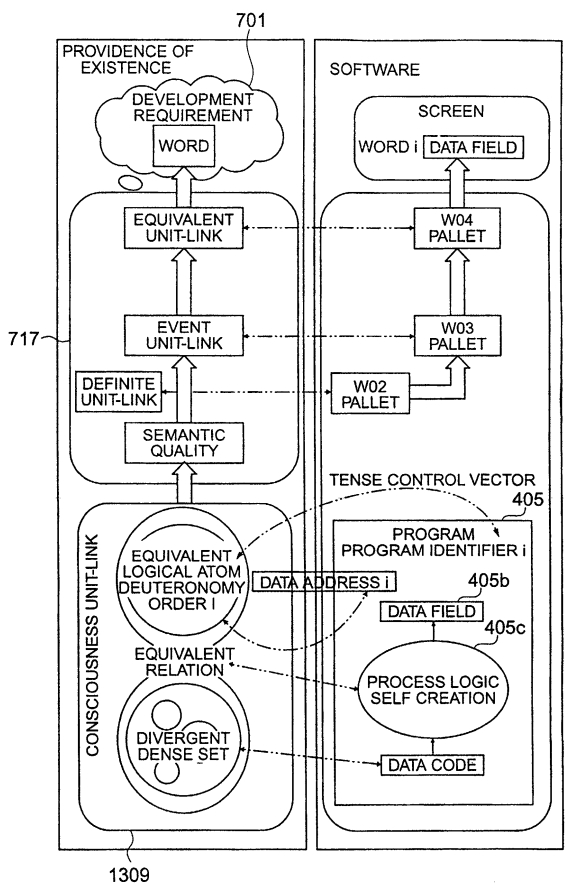




Printed by Jouve, 75001 PARIS (FR)

## Description

2. Technology field

This invention is related to software determination method, software usage method, a recording medium, a processing apparatus, software maintenance method, software transplantation method, software management method, Homogeneity Map creation method, Tense Control Vector creation method, Pallet Function creation method, Pallet area determination method, Pallet Chain creation Function method, Duplication Vector creation method, Homogeneity Vector creation method, Action Vector creation method, software loading method, software development method, data structure replacement method, data value replacement method, an existing program analyzing method, software development management method, a parallel computer, a judgment assisting apparatus, software development business method, file determination method, software operational management method, software univocal determination method, consciousness model devising method, algorithm devising method, a program product, and a transmission wave and a paradigm based program, which are applicable to all software for all fields, including business software, game software, control process software, for example, but not limited thereto.

3. Related technologies

In the following, detail verification is presented concerning problems of the traditional so-called software technology, software engineering and software product.

All regarded to date as so-called 'software product', including programs, may safely be said to be what a simulated specification of 'information movements' has been realized on a computer as an objective program, thereby the 'information movements' concerned with a target work and functionality aimed to be software has been analyzed by the knowledge based on SE's personal ability and experience.

As a result, a conduct and a 'thinking logic' of a man handling 'information' concerned with a target work and functionality has inevitably crept into a target program as a product of analysis brought about by the knowledge based on SE's personal ability and experience. It may as well be said that a human personal factor corresponding to human conduct and its options which can take various shape on the time axis and space coordinate with the help of knowledge based on SE's personal ability and experience, has been implanted in mixture into a target program as a standardized program logic. Consequently, a 'software product' with the distorted development intent had nothing but to face a fate of the mass production.

However, considering both a reality of no discovery of the axiom, theorem and principle that can be called a 'rule of thinking logic', corresponded to conduct options of a man handling 'information' which can take various shape on the time axis and space coordinate, and a fact that 'engineering' and 'technology' are concepts only existing on the presence of the axiom, theorem and principle, it can be said whatever has traditionally been referred to as software technology and software engineering does not qualify as technology or engineering.

That is, it leads to a conclusion that a 'software product' backed up by so-called software technology and software engineering not possessing a 'rule of law', i.e., an 'ability of reproduction' has not been a genuine thing (a correct solution). In this context, a genuine thing (a correct solution) is meant to be an object produced under the circumstances where the production method affords reproduction.

Details are explained later, but, conclusively, it is not too much to say that a genuine program has never been realized except programs determined by this invention, produced, mounted on a computer, and executed.

This invention called 'Lyee' establishes an axiom, and theorem concerned with a 'rule of thinking logic' corresponding to conduct options of a man handling 'information' which can take various on the time axis and space coordinate and, from the principle based upon axiom, and theorem, properly grasps a genuine program as a static state that is a genesis program (source program) transcribed as codes thereby not allowing any room for personal and changeable characteristics, instead of as a 'dynamic state', so to speak, simulating an above-mentioned personal mode of a human onto a computer.

Further, this invention has understanding as follows: when an objective program actualizing a genesis program (source program) onto a computer is running or in operation, it is at least dynamic in a sense that a man, who uses an aimed program or handles 'information' concerned with the target work and functionality, can act and think variously on the time axis and space coordinate; and in light of the fact that this dynamism makes a strict prediction impossible, a genuine software should be able to flexibly cope with and operate to follow the human's 'thinking logic' of such unpredictability as well as to simply stick to assist in a thinking logic without giving any restriction to the logic.

After all, a genuine program is, in a sense, is what has eliminated a thinking logic which ushers a movement of a man handling 'information' concerned with the target work and functionality, and in this sense, it must not be what contains 'movements' of such uncertainty of various unpredictable thoughts and conducts of a man as a stereo-typed programming logic (by use of the knowledge based on SE's personal ability and experience).

The necessary and sufficient condition to realize this genuine program must be as follows: To find out a structural rule of a human's thinking logic; and thereafter to create only information leading to the activation of thinking logic, while excluding the thinking logic; and to accept, as it is, the information created by the activated human's thinking logic, in accordance with the rule found.

That is, a software product which can reflect the development intention as it is, without necessitating SE's intervention, must be called a genuine thing (a correct solution).

3.1 The essence of software

An information processing system is composed of 'software', 'hardware' and 'human concerns.

Hardware consists of a computer called CPU (Central Processing Unit) and various kinds of peripheral devices.

Software consists of programs comprising of columns of symbols (codes), which are a group of commands mounted onto the main memory in the CPU and intended to operate the hardware as prescribed (hereinafter called code column) and, and a requirement definition document, which specifies a condition determine the code column and the various factors of hardware configuration elements and its architecture.

Human concerns is composed of 'client requiring software development 'development engineer' and 'user'.

For both hardware and software, there are design drawings defining configuration elements to realize prescribed purpose and requirement definition documents defining various factors of configuration elements. This requirement definition document is made by the 'development engineer' based upon the languages 'the requiring client' expressed as the development intention. The hardware and the software are realized in accordance with the created requirement definition document.

I n case both of hardware and of software, the requirement definition document is expressed with a natural language and drawings. This requirement definition document cannot be a structure composed of materials possessing mass, i.e., physical properties, and it rather possesses a nature of 'an entity of meaning' which is a means to communicate what is intended.

What is realized by the requirement definition document is, a structure comprising materials possessing mass, i.e., physical properties in case of hardware, whereas, a program composed of code columns which are a group of commands to operate a computer as prescribed in case of software. This program is never a structure having materials possessing mass, i.e., physical properties, instead it can be regarded as an object on which a nature of 'an entity of meaning' is assumed, or a such nature itself in its origin. For this reason, the nature of software, as is shown by the meaning of 'soft', is different from that of hardware.

A concrete name and nature of an elementary particle, which is the minimum unit of a material, is expressed by the language. Likewise, the name and setup of the universe, which is the maximum unit, is expressed by the language. Further, sensorial feelings such as 'beautiful', 'pleasant', 'comfortable', etc. are also expressed in language. In these expressions, when an object to be expressed is a structure composed of materials possessing mass, i.e., physical properties, a natural rule allows us to have an objective and common recognition of its scale, nature, capabilities, etc., which are elementary factors of the structure. However, how to sense an object assuming its scale, nature and capabilities, that is, what value and meaning it possesses exits buried in minds of people recognizing the meaning. Thus, an objective and common recognition cannot be obtained.

Human beings have established grammar as a rule concerned with how to place words to express an object and communicate it to others, but the grammar alone rule one's sense of value and the grasp of meanings, which leads to the current situation where humankind has never found the rule. For example, there is no grammatical error in a sentence "I am a lion.", but its meanings may be of various kinds depending upon the context, such as "My name is Lion.", "It is a lion I like.", etc.

That is, 'the expanse of meaning' has a feature that its contour (or boundary) which is the limit of its clear expanse cannot be grasped inevitably as objective and unique being. The fact that the contour of the meaning expanse cannot be objectively grasped means that the 'meaning' cannot be set as objective and unique being. This leads to a conclusion that the common recognition of the meaning cannot be absolutely established.

The consequence is that a meaning is fundamentally 'indefinite'.

This can be explained by a basic mathematical way of thinking about the set theory with a proof as follows:

As advocated by Cantor in his 'Transfinite set theory', "the 'set' is one whole U. And, what constitutes the whole m (called an 'element' of the whole set U) can be fixed and distinguished from each other, and it is an element of our intuition or speculation (that is, giving a meaning)", a meaning possessed by individual languages is a whole set formed by the set's elements gathering and it can be regarded as established in the set body formed.

The set theory has an axitom that, if a set body of a meaning of languages is our human intuition or speculation (that is, giving a meaning) which can be fixed and distinguished from each other, and if the number of its element m is n, it is composed of $2^n$ pieces of subsets. Accordingly, in order to define one meaning of languages (a set) and make it the only one, a meaning attached respectively to the $2^n$ pieces of subsets composing, the set must be strictly regulated to be definite and unique.

In order to enable this regulation, it is indispensable to understand what the meaning-giving element m is and what the condition to actualize the subsets is. However, human beings have discovered neither a condition to identify such elements nor such element itself. An 'empty set' is contained in the $2^n$ pieces of subsets. The 'empty set' very appropriately means that the contour (or boundary) cannot be defined. In other words, it is synonymous as 'infinite'. This 'infinite' is expressed as '∞' in mathematics, but human beings have never discovered what it in reality is. This is also clear from the fact that a so-called 'B. Russell's irrationality' paradox has never found what can be regarded solution. Summarizing above, a conclusion is reached that a meaning attached to a natural language is 'uncertain'.

For this reason, Wittgenstein thought that something, in place of natural language, was necessitated in order to put a meaning into a state of being not uncertain and named this set's element as a logical atom. Speaking conclusively, this invention discovered a solution to avoid the infinite paradox and has established the logical atom theoretically that can exclude the uncertainty. The Tense Control Vector, mentioned later, corresponds to the logical atom.

It is a reality that, by using words with their meanings uncertain, we human beings, communicate with each other, use the requirement definition based on the communication, create a sense of codes and manuals based on the requirement definition, and use products in accordance with the manuals. Deeper consideration on this matter leads to an understanding that, it is a natural rule that is expressed with equations and functions by using words possessing such nature. Although a natural rule has it that the left side of equation is automatically equal to the right side thereof, if it is grasped from the value and meaning viewpoint, the above left and right sides are not necessarily destined to be equal in terms of its 'value' and 'meaning', because the expression element of languages potentially accompanies uncertainty. Rather, it potentially contains uncertainty in the ultimate domain.

3.2 A relation between requirement definition and its product

Between the requirement definition and a product (i,e, a structure made up of materials or a program composed of codes) developed and completed based on the requirement given by that definition, there normally lies a process (step) which inevitably contains work as well as a place and a time to materialize that work. This step, even if its product is a structure composed of materials like hardware, or an entity of meaning without possessing mass like software, can be regarded as one of the staged steps of detailing work of completing rendering an uncertain thing a definite one, for both products, in that its origin is a 'requirement definition document' which is nothing but a meaning and which is essentially uncertain.

In case of a product composed of a hardware structure, since its product is a structure possessing materiality, i.e., physical properties, a common recognition can be established with precise accuracy by a natural rule that can explain its scale, nature and capability by use of equations. Thus, the step of this staged detailing work can be logically established. This conclusion is testified by current situation enjoying the advancement of scientific technology and mass-production industrial society.

On the other hand, software is composed of languages which have uncertainty in essence both for its requirement (a written document comprising natural language called requirement definition document) and its product (a program composed of a series of codes). The requirement is defined by natural language, et al. The content expressed by the language represents functionality to be realized, and the functionality is a 'value' conceived as obtaining prescribed effects by having signal data embodied via display screen and voucher and recognized as information . Thus, it can never be a structure composed of materials possessing mass, i.e., physical properties.

Also, a program is defined by a language composed of a series of codes called programming languages. The object expressed by the programming language contains process procedure (logic), data structure and data code, having different nature from each other, and it can never be a structure composed of materials possessing mass, i.e., physical properties, either. That is, the existence of software contains the entity of meaning possessing a nature of uncertainty from the beginning to the end, i.e., from the development to completion, from completion to operation and maintenance.

If what reasonably lies between requirement and its product is a detailing work step for making uncertain things definite ones, since software product assumes an uncertainty nature, requirement, theoretically it will never be able to arrive at the definite state, no matter how far such a step is fractionated. That is, in case of a software, a concept called step cannot be established in a strict sense. With this understanding in mind, an observation of problems held by traditional software technology is further explained.

3.3 Critical viewpoint on traditional software technology

(a) It takes a personal ability as a premise.

Software exists as an entity of meaning. In a sense that it exists as an entity of meaning, although a concept 'step' is not established as already described, all traditional software development methods grasp software as the same as a concept of physical structures which can be realized through steps. This is clear, for example, with cases like officially approved SLCP (software life cycle process), well-known OOA (object oriented aproach) and DOA (data oriented aproach).

The contradiction of traditional software development methods on which a step is premised while a concept of 'step' is not established, has caused a situation where the software development and maintenance staff cannot help but solve the uncertainty in the category of their own personal ability, experience and knowledge.

For example, in SLCP, activity procedures to develop software are indicated as follows:

(1) The 'job procedure of work' and 'process procedure until performing functionality', intended to be realized into software be analyzed and fractionated into steps.
(2) Inter-step or inside step, job procedures, process procedures and interfaces (information and its media to be taken as an object of the job and the process) of each fractionated step be clarified.
(3) Software composite items, as of materializing fractionated steps and interface clarified as software be fixed.
(4) Quality characteristic specification (functionality, reliability, usability, efficiency, maintainability, transplantability, etc.) for the individual software composite items be fixed.
(5) The fractionated items (above (1)), the clarified items (above (2)), and the defined items (above (3)(4)) be documented.

The purpose of such activities as fractionating, clarification, definition and documentation referred in (1)-(5) is to set conditions to gain the final product that is to determine program's series of codes. If the final product is regarded as the left side of equation, these activities can be grasped as the right side of equation, that is, a function. After all, these activities are a work aimed to identify a function and its variables of equation. However, considering the present situation where humans have not been able to find out a natural rule in the domain of meaning, the preparation of a function and identification of its variables had to be entrusted with personal ability, experience and knowledge of persons doing it, which is not disputable. In other words, to define software functionality means that it is affected by the influence of the personal category of ability, experience and knowledge of staffers, and in a sense that it is a product of personal category it cannot be called a function in its strict meaning. Therefore, it is nothing but taking a premise that it is impossible to create software of correct solution. (See figure 165).

The software of correct-solution, mentioned here, means a software satisfying the conditions that the software, that is, the requirement and the series of codes be created identically as if they are a solution to a function, without being affected by their personalities, even when multiple people produce the software for one user requirement. (a) The contour of a development requirement is premised to be definable.

Each of job items of SLCP is purposed to establish a contour of development requirement. This must have originated from the grasping that software is of the same nature as of physical structures, in that the contour can be commonly recognized by a natural rule that can explain its nature and ability by use of a function. However, software exists as a meaning entity containing uncertainty as its essence, and the contour of meaning cannot be established as mentioned before. So, we can easily assent how reckless it is to establish a contour of this requirement for itself. In other words, as long as it is an existence of a meaning entity, it cannot escape from the fate that the ambiguity will continually remain the same as in the beginning even if the ambiguity in the beginning is fractionated limitlessly.

3.4 Structural defect of the traditional software

(a) It takes a premise of personality.

On the other hand, an observation on problems held by the present software production method is made from another viewpoint.

Conclusively speaking, all ideas presented as the traditional software technologies have grasped software development requirement in information processing system, that is, contents to be described in requirement definition documents, as components equipped with prescribed physical properties and their structure, while adopting the same approach to build software as of making material objects. It is not difficult to imagine that, as an inevitable consequence brought about by the above, a method of implementing efficient jobs has been groped for making each development step run smoothly without inconsistency at every interface, as shown by the conveyor system adopted by Ford's automobile production method.

However, the interfaces between steps in software development activities are nothing but languages containing also uncertainty. So, it is impossible in principle to wipe out the possibility of causing inconsistency at each of the interfaces.

Surely, events such as data display on the screen, data output onto Printouts, control information transmission to operational devices are objectified to satisfy functions, and their phenomenon are embodied by program's operation. But, it is not deniable that the function performed by the program has often become considerably different from the thinking activities of the development staff, that is, the planner's will and intention. The reason for this is that if a physical structure and software examined in light of proportion on relationship between a positive action to actualize each function (also called 'behavioral activity'. Same as herein after) and a thinking action to materialize it (also called 'mental activity'. Same as herein after), generally a physical structure has the ratio of the mental activity working and the behavioral activity can be 10:90 since the scarcity in the influence of thinking makes it easy to recognize objectively what is intended, whereas a software has the ratio thereof 90:10, since what is intended is not easy to be recognized objectively. For this reason, in case of software as described before, as a possibility of causing inconsistency between each of steps cannot be wiped out, an influence of development engineer's thinking activities become extremely large upon the realization of functions. Thus, it causes a structural defect which contains large room for producing a product much distracted from the planner's will and intention. Thinking the essence of software together with the difference in ways of existence between software and hardware in perspective, it is well cognized that a clue to fundamental problems of the traditional software development method and their fundamental solution method can be obtained.

Mentioning in different terms, no doubt software, too, finally creates a functional event, the same as in a physical structure, but its way of being in existence is fundamentally different from that of a physical structure in a light of its process leading to realizing a product to perform the functionality. We cannot say, however, that such recognition concerning the being of existence of the development object has ever existed in the traditional software development 'technologies'. That is, the traditional software production has adopted an approach much closer to the category of an artistic 'work' that is influenced by the experience and knowledge of staff, than to that of a 'technology' bringing about the uniformity in results of meaning no matter who works on it. Consequently, a reality is that there was originally nothing which can be called 'technology' in the traditional software production, and that the traditional software development has been fulfilled by empiricism and quick-fix means. Upon second thought, it may as well be said that, from such an approach adopted to date, it was not possible to realize a technology that brings about a true innovation in software production. It is thought that an explosive software demand in accordance with the current rapidly-changing information society compelled to lose desire and time to attempt grasping a relationship between software requirement and programs from the 'technological' aspect, rather than from artistic aspect, and it has spurred these trends.

(a) A black box is inevitably contained.

A physical structure is an existence recognized objectively as a visual contour, etc., but there is no such contour in software. If anything that corresponds to the 'contour', it will be a series of codes themselves which are the content of software.

What is commonly recognized traditionally by order-issuing and order-receiving parties concerning the contour remains to be the movements of various peripheral devices which are anticipated by a row in a series of codes.

Therefore, with this method, it is no more than that both parties make an agreement, as a base, on a functional event appearing as a result of program's operation. Consequently, prescribed movements are regulated as a requirement, and if the requirement is fulfilled it is accepted, while burying a subject into staff's individual will and intention, which is to pursue how to satisfy the requirement as 'a series of codes' structure of a correct-solution (determined univocally by anyone. Same as herein after.). Viewed from the third party's standpoint (often, even including the person himself concerned), the staffs will and intention to materialize this subject is made into a box with its contents unknown (This is called 'black box'. Same as herein after).

That is, the reasons for having determined the i-th line statement of the program source list that was realized as software and the i+1-th line statement likewise were buried between codes lines as creator's own will and intention and made into a black box, which is only known to the producer. (Refer to Fig. 168.). After a while, it happens ironically that the creator himself even does not know what it was. Likewise, it is a daily experience that we are lost in what to do with. For this reason, it is a reality that not only software development but also maintenance requires a huge amount of labor and time to elucidate this black box.

Problems of software production and maintenance come from this black box. It is attributed to the fact that the black box has a structure that cannot exist without a dependent relationship, not being independent, between the statement to process the i-th line data item in the program source list and the statement to process another i+1-th line data item (a relationship between a word and another word, in other words). And, no traditional software 'technology' has ever succeeded in removing this black box, which means that it is impossible to fundamentally conquer various problems concerned with software by the traditional methods.

(b) Negative legacy

The recent trend in a software production is seen in outsourcing and package-oriented, but countermeasures, still containing the black box problem of a software mentioned above, are nothing but worsening further software's cost performance. The same applies to a variety of techniques and tools proposed, such as DOA, SD (structured design), and OOA. They might have, contributed to a slight improvement in enhancing the productivity so long as individual steps of software development and limited requirement are concerned. However, as long as a method of grasping a requirement as what satisfies functionality remains used, it inevitably necessitates steps. And, the steps, as mentioned before, amplify a black box into a new black box, thereby inevitably causing limits to the whole productivity enhancement.

In the development work of information processing system, unless the productivity in the 'discussion and thinking' part occupying 90% of the work is enhanced, while reducing black boxes, a dramatic efficiency cannot be realized. It may as well be said that, nevertheless, the traditional efforts have merely been focused wholly onto the work efficiency improvement for the remaining 10% manual work part. The reason for this is attributed to the fact that software was not recognized as an entity of meaning, and to the illusion that improvements could be achieved by the same approach as those used in physical-structure development. Thus, this physical-structure based approach has been adopted for software production. Reasons for traditional efforts not having attained fundamental improvements are found in the fact that a methodology for enhancing the productivity in the 'discussion and thinking part' could not be established. That is, a clue to save amounts of mental activity could not be seen by the same way of thinking as in creating something physical. In other words, in the first place, it is doubted that the direction in the effort itself was wrong.

For example, program's elements which is positioned as a final software product are composed of:

(1) Process logic
(2) Data Structure
(3) Data code,

and, in spite of the fact that they are what originally exist individually and independently in view of their essentially different nature, it is likely that they were confusedly grasped in a bundle of a program. The Y2K problem which occurred on the arrival of year 2000 was merely caused by having assigned a process logic's characteristic to data code, which acknowledged 2000s if the lower two columns were below certain figure and 1900s if they were above certain figure. However, a data code of year 2000 should never contain any other meaning except what was meant by the data code meaning year 2000 alone.

That is, a failure occurred by replacing an originally uncertain meaning with a functional structure that is a definite existence. It may as well be said that this failure has triggered all problems associated with software production. This irrational cycle continuously creates a negative thinking structure in the software field, and as a result of the software with such negative thinking structure being pumped out one after another, a 'negative legacy' has been accumulated in the field at an overwhelming speed.

A 'negative thinking structure' herein means an existence containing the above-mentioned black box indicated by the following logic.

(1) Logic, despite the fact that componentization and common-unification by using an entity of uncertain meaning is impossible in principle, to attempt to improve software problems by those approaches.
(2) Logic to insist that the outsourcing is a measure to attain cost reduction, even though it rationally leads to high cost in a long run because the responsibility range cannot be clarified due to the fact that the developing engineers' side cannot possess any special development method as long as they use traditional methods as a premise, by which project concerns become more complex as far as a package contract is particularly concerned.
(3) Logic to consider software development can be rationalized by business packages and IT (Information Technology) containing a black box

Putting developers' merits and demerits aside, any idea from business viewpoint can be freely advocated, but such developer side will charge software users for costs incurred. Therefore, the responsibility for selecting such idea is never small. With a de facto standard citing that a bad law is still a law and with the 'mandatory regularization', the solution of problems cannot be attained from the root, even if they are used as an indulgence.

A meaning we humans create changes and diversifies as time goes by, and it is unfixed without physical properties. Therefore, its componentization and common-unification cannot be established. As software exists as an entity of meaning, it is a natural conclusion that the componentization and common-unification do not exist in software.

The functionality of software means an action produced at the user side, who can produce meaning and value in relation to software-mounted information processing system and users themselves. It is never produced by the system development side. Therefore, a method of consigning all to the system development side (outsourcing) cannot be established in its real meaning in software. Unless there appears a software that can produce a meaning autonomously, there won't be software and software-mounted system that can produce the functionality autonomously, either. In this connection, so-called artificial intelligence trying to simulate human intelligence by complicating recognition technology, too, is merely a negative logic in this sense. Or, it may as well be said that the naming of 'artificial intelligence' that gives an impression as if a machine produced a meaning autonomously is inadequate.

As long as a meaning-producing scheme is not established in itself, it is impossible to establish intelligence. And, we did not avail, in principle, a thinking method that can establish software to produce a meaning.

If we can understand that an objective and common recognition cannot be found about a rule that underlies software production, it will be self-evident that it is an error to grasp the being of its existence as a functionality of a physical structure. Surely as the same token software has been advocated and popularized mainly by the Western people who are good at analytical thinking method based on functionalism, but a correct software-grasping thinking method, in a sense that software is a meaning containing uncertainty as its essence, never exists on the extension of the analytical thinking method, rather it must be grasped as a philosophic proposition. Mysteriously, people good at an analytical thinking method did not recognize, as a conclusion of their analysis, that 'Software is an entity of existence being uncertain essentially.' Conclusively, it has become the very root bringing out the largest inconsistency contained by the traditional methods.

As software developed even by the traditional methods operates to serve, success or failure of software development cannot simply be measured by the 'operable or not operable' evaluation. It must be evaluated by development costs, the rationality of development term, the quality of maintenance efficiency, etc. When our thinking is refreshed in this way, there is a big question if we can call development achievements made so far a success.

Definite defects in the traditional methods conclude to that, no matter how well requirement definition documents are written, they have changed into a black box at the stage of a program. Taking into account the fact that software problems occur in relation to this black box, success or failure of software development is to be viewed based on a quantity of black boxes.

The Y2K problem, too, as mentioned before, originates from this black box. Also, contrary to benefits of IT, computer viruses and vaccines present 'a vicious circle', which is also attributed to this black box. Concerned parties exert their effort to avoid the occurrence of such malfunctions, but as long as black boxes are not eliminated from software, it is self-evident that problems of the same nature are repeated, no matter what kind of effort is exerted. Unless evading from traditional methods, it will present a situation where the right hand takes measures for a black box, at the same time the left hand producing additional black boxes, regardless of the efforts exerted by concerned parties. A world of a comic play that cannot simply be laughed at is being developed, if seen from the ceiling.

For software development, there is an idea citing that a program itself can easily be created because the upper-stream specification is difficult to determine and that productivity in programming can be ignored. This recognition is a fatal error. This is because a final product of software development is presented by a series of codes and the upper-stream specification can only be determined by premising a rule establishing a structure of the final product, which leads to the conclusion that the one side is easy and the other side is difficult.

In this regard, as far as traditional methods are concerned, any upper-stream specification will turn into a black box as a program as it passes through many steps, regardless of its description, thereby amplifying uncertainty. Therefore, the justification and verification of the upper-stream specification can only be implemented by running a program. Thus, it is well understood that it never happens that the one side is easy and the other side is difficult.

This fact is an evidence indicating that the upper-stream specification and the program cannot exist individually and independently, but must be co-dependent. Also, those not knowing complication of the lower-stream must recognize and understand a fact that a completion of a program satisfying development intention can never be achieved only with available requirement and also that the upper-stream specification will turn into a black box as a program as it passes many steps, regardless of its description, thereby amplifying uncertainty. Otherwise, it may well be pointed out that they must not involve themselves in this field.

Traditional methods, in the course of creating programs, determine program's codes' worth only based on the viewpoint of 'run or not run', without any relation to whether the requirement is correct or not correct in light of a rule of software. Besides, upon examining a corresponding relation between traditional methods' requirement definition documents and a program, less than 50% of the information regulating program's code columns are written in the upper-stream specification.

Nevertheless, an illusion exists among concerned parties that the upper and the lower streams can be separated as mentioned above. Most mysteriously, even those who once experienced in creating programs, once they become managers remarkably turn into possessing an illusion that the upper and the lower streams are separable. Regrettably, this illusion is attributed to nothing but ignorance.

Summing up above, software is composed of requirement and program, and a relationship between requirement and program must be grasped from the viewpoint of how to realize it as a correct-solution software in accordance with a software rule. However, in traditional software technology, software production technology as induced from such viewpoint did not exist.

3.5 Lyee's idea and Lyee's essence for software improvement

When it comes to software productivity, the personality characteristic above all must be eliminated. To eliminate the personality from software production means that no matter who creates the code the same codes can be obtained. Having no room for software production engineers' capriciousness to enter means no personality.

Now, the occurrence of a variety of traditional technological problems is attributed to, with regard to the upper-stream the inability to completely wipe out the room for the personality to enter during the course of understanding the 'development intention' based on words uttered by a development-requiring party.

Next, regarding the lower-stream, the cause can be found in a fact that, one statement processing a data item corresponding to a certain word and another statement processing another data item corresponding to another word could not be dealt with as independent program without letting personality enter in each of words composing a requirement uttered in language by the development-requiring party as an 'development intention'.

However, 'to eliminate the personality' is, after all, a result event, and in order to invite this result event as a state in which 'the personality is eliminated', we have to go up to the essence of software, elucidate it, and on this essential level, build a system which can separate codes, as a real entity of software, from the personal 'interpreting' conduct done in the course of the code determination.

This is because if we stretch our application of an idea that software is what simulates on a computer a relationship between one speech and behavior (a result event) and another speech and behavior (a result event) both materialized and embodied inevitably by human logic structure, thinking, and life phenomenon, it will end up ignoring logical structure and logical thinking which established 'development intention' of development requiring party who have determined a word as the word meant literally, the development intention underlying each word uttered by the person in charge as a development requirement Viewed, to the contrary this is also because, with such imagination, it is impossible to avoid an entry of development engineer's arbitrariness, in a process of grasping a development-requiring party's 'development intention' which has been made into a black box, after being buried between words by development engineers who try to convert the relationship of result events (an existence event which was embodied as conduct and behavior)into terms understandable to a computer.

Summing up above, in order to eliminate arbitrariness, it is necessary to simulate a logic structure itself, which must be latent in the domain of the depths of consciousness determining a word actualized, i.e., the logic structure having caused the word, without an entry of development engineer's human capriciousness.

A variety of 'techniques' and 'tools' proposed to date have not accompanied the above-depicted observation on the logic structure which should be latent in the domain of the depths of consciousness. Therefore, it is acknowledged that none of the subjects of software production has been lead to a fundamental solution.

What brings about a dramatic innovation in terms of quality in software production now must be sought in a methodology which simulates a logic structure ought to be latent in the domain of the depths of consciousness, which enables to eliminate the personality.

A development requirement of information processing system is expressed by 'language (words)'. A program, also which is a development result, is composed of 'language (words)'. The meaning the requirement-issuing sides gave for this 'word' cannot always be identical with the meaning the requirement-receiving sides interprets from the same word, strictly speaking. This is because the 'interpretation' of a 'meaning' varies according to human circumstances and experiences. For this reason, in the development step a program had to be made by 'interpreting' a requirement expressed by 'words'.

Nevertheless, as long as we handle 'words' just as they are, a meaning of which cannot be regulated accurately (that is, unambiguously) to its detail, it is naturally impossible to reduce mental activity of interpreting, and it can never be attained for a finished program to reflect 100% of the requirement-issuing party's intention as it is. Further, in the maintenance step, it is not always the case that maintenance staff understand in the same way as the programmer intended at a programming stage and that appropriate amendments be done based on such understanding. In the sense of placing words as a base, also for the standardization of work, it is naturally impossible to reduce mental activity of interpreting, therefore, no fundamental solution cannot be brought about even by means of standardization of work and preparation of manuals.

On the other hand, not many words are required to understand that a computer never interprets a human 'meaning' but simply handles symbols (codes). A 'meaning' is something attached to a data code, in human minds, when the human look at the data code displayed by a computer as instructed by the series of codes, so it cannot be expressed verbally. In this regard, a data code is what is displayed in each of data fields corresponding to respective words composing a requirement, which is a result event brought about by a development-requiring party perceiving 'development intention' in their mind and speaking language, and, after all, it must be the information expected for the word in minds of the development-requiring party.

Likewise, if points of traditional technological problems are elucidated, it concludes that, regardless of software production, a hardware-like technique (physical-structure approach), an industry's main stream until then, has been applied to what exists in 'soft' minds or so-called software.

The present invention Lyee has set a thinking method fundamentally different from the traditional ones, and by sublimating this thinking method into a form applicable to a realistic problem of software development, it fundamentally solves traditional technology problems mentioned above.

After all, Lyee sets its basic principle that it clarifies the essence of software by grasping software with a conception entirely different from the traditional ones the conception citing: in terms of a relationship between one 'existence phenomenon' and another 'existence phenomenon' expressed as speech and behavior, by grasping an existence phenomenon called a natural phenomenon and in terms of its relationship between the phenomenon and each of the 'existence phenomenon' of the speech and behavior, that is, meanings possessed by individual words, or the 'intention' inviting a word as that word itself, the former relation is independent, while the latter relation is synchronous and provides no room for the entry of human arbitrariness.

In other words, Lyee in essence, by grasping the essence of software, materializes a program as each program of individual words corresponding to the respective words, which is beyond traditional way's imaginations,

Also, Lyee, in essence, regulates the respective word-by-word programs, independent for every word, by a simple and universal structure which is not dependent on words.

Accordingly, Lyee, in essence, actualizes all software by the only one universal structure.

Also, Lyee, in essence, can obtain an aimed source code as a result of adopting a mechanical algorithm for solving a function by defining the universal structure as a function called Scenario Function and by substituting words as its variables.

As a result, Lyee, in essence, can determine a requirement and a program codes thereof concurrently by solving the Scenario Function. Also, Lyee, in essence, does not require the regulation of database.

Accordingly, Lyee, in essence, does not require personal abilities, such as SE's experience, knowledge, application ability, and can create software automatically only by means of a mechanical algorithm.

Further, Lyee, in essence, herewith eliminate logic related to procedures of operations from software development work, thereby requiring neither business process logic nor a design work related to business steps, which was called the upper-stream by the traditional methods.

Accordingly, Lyee, in essence, entirely changes the development step all of a sudden by innovating, to an overwhelming extent, development steps, work steps and development term.

Particularly, Lyee, in essence, enables to shorten software development time overwhelmingly and brings about a substantial impact upon management concerns by avoiding an opportunity loss.

Further, Lyee, in essence, enables easy maintenance by anyone.

For this, Lyee, in essence, does not require traditional multi-layered development team system, while setting SE's free from programming, thereby enabling them to dedicate to higher professional works.

Also, Lyee, in essence, entirely changes how software assets should be, and enables to realize management innovation in a true sense.

Also, Lyee, in essence, entirely changes a traditional development cost estimate method, specifically, from cost-oriented to product-oriented.

Speaking in general, Lyee, in essence, provides a revolutionary solution to the traditional software problems.

The background of this invention enabling above is Lyee's theory, which enables to determine a universal nature concerned with software, that is, the one and only software in no need for personal ability during all stages from the determination of requirement to the determination of code columns.

Further to add, concerning the proposition for these problems, the applicant of this application has already filed patent applications, PCT/JP96/03183 and PCT/JP97/01492, based on the forerunner of this invention. This invention is a complete form, which has made improvements on various inventive points applied by those applications and made them into a better form of perfection.

3.6 Theme which this application aims to solve.

In order to provide a fundamental solution to problems held by the traditional software production, this invention's objective is to provide the following by means of grasping software with a concept entirely different from the traditional ones, the concept enabling to grasp a 'meaning' captured by humans' sorting it out from a 'structure' to create a meaning:
software determination method, software usage method, a recording medium, a processing apparatus, software maintenance method, software transplantation method, software management method, Homogeneity Map creation method, Tense Control Vector creation method, Pallet Function creation method, Pallet area determination method, Pallet Chain creation Function method, Duplication Vector creation method, Homogeneity Vector creation method, Action Vector creation method, software loading method, software development method, data structure replacement method, data value replacement method, an existing program analyzing method, software development management method, a parallel computer, a judgment assisting apparatus, software development business method, file determination method, software operational management method, software univocal determination method, consciousness model devising method, algorithm devising method, a program product, and a transmission wave and a paradigm based program.

Another objective of this invention, by mans of grasping the essence of software, is to provide the following which defines software by use of a simple structure which has never been imagined traditionally:
software determination method, software usage method, a recording medium, a processing apparatus, software maintenance method, software transplantation method, software management method, Homogeneity Map creation method, Tense Control Vector creation method, Pallet Function creation method, Pallet area determination method, Pallet Chain creation Function method, Duplication Vector creation method, Homogeneity Vector creation method, Action Vector creation method, software loading method, software development method, data structure replacement method, data value replacement method, an existing program analyzing method, software development management method, a parallel computer, a judgment assisting apparatus, software development business method, file determination method, software operational management method, software univocal determination method, consciousness model devising method, algorithm devising method, a program product, and a transmission wave and a paradigm based program

The other objective of this invention is to provide the following, enabling to automatically create software only by a mechanical algorithm without necessitating personal abilities such as SE's experience, knowledge, application ability: software determination method, software usage method, a recording medium, a processing apparatus, software maintenance method, software transplantation method, software management method, Homogeneity Map creation method, Tense Control Vector creation method, Pallet Function creation method, Pallet area determination method, Pallet Chain creation Function method, Duplication Vector creation method, Homogeneity Vector creation method, Action Vector creation method, software loading method, software development method, data structure replacement method, data value replacement method, an existing program analyzing method, software development management method, a parallel computer, a judgment assisting apparatus, software development business method, file determination method, software operational management method, software univocal determination method, consciousness model devising method, algorithm devising method, a program product, and a transmission wave and a paradigm based program

The other objective of this invention is to provide the following enabling to determine software by adopting a mechanical algorithm which solves a function by substituting identifiers for variables of the function called Scenario Function: software determination method, software usage method, a recording medium, a processing apparatus, software maintenance method, software transplantation method, software management method, Homogeneity Map creation method, Tense Control Vector creation method, Pallet Function creation method, Pallet area determination method, Pallet Chain creation Function method, Duplication Vector creation method, Homogeneity Vector creation method, Action Vector creation method, software loading method, software development method, data structure replacement method, data value replacement method, an existing program analyzing method, software development management method, a parallel computer, a judgment assisting apparatus, software development business method, file determination method, software operational management method, software univocal determination method, consciousness model devising method, algorithm devising method, a program product, and a transmission wave and a paradigm based program

The other objective of this invention is to provide the following, by using the above-mentioned procedures, eliminating business logic from the software development work and not necessitating business based process logic as well as a design work which was called the upper-stream by the traditional method: software determination method, software usage method, a recording medium, a processing apparatus, software maintenance method, software transplantation method, software management method, Homogeneity Map creation method, Tense Control Vector creation method, Pallet Function creation method, Pallet area determination method, Pallet Chain creation Function method, Duplication Vector creation method, Homogeneity Vector creation method, Action Vector creation method, software loading method, software development method, data structure replacement method, data value replacement method, an existing program analyzing method, software development management method, a parallel computer, a judgment assisting apparatus, software development business method, file determination method, software operational management method, software univocal determination method, consciousness model devising method, algorithm devising method, a program product, and a transmission wave and a paradigm based program

The other objective of this invention is to provide the following enabling to obtain a requirement and a program at the same time:
software determination method, software usage method, a recording medium, a processing apparatus, software maintenance method, software transplantation method, software management method, Homogeneity Map creation method, Tense Control Vector creation method, Pallet Function creation method, Pallet area determination method, Pallet Chain creation Function method, Duplication Vector creation method, Homogeneity Vector creation method, Action Vector creation method, software loading method, software development method, data structure replacement method, data value replacement method, an existing program analyzing method, software development management method, a parallel computer, a judgment assisting apparatus, software development business method, file determination method, software operational management method, software univocal determination method, consciousness model devising method, algorithm devising method, a program product, and a transmission wave and a paradigm based program

The other objective of this invention is to provide the following enabling to entirely change the development step by reducing development steps, procedures and development term to an overwhelming extent: software determination method, software usage method, a recording medium, a processing apparatus, software maintenance method, software transplantation method, software management method, Homogeneity Map creation method, Tense Control Vector creation method, Pallet Function creation method, Pallet area determination method, Pallet Chain creation Function method, Duplication Vector creation method, Homogeneity Vector creation method, Action Vector creation method, software loading method, software development method, data structure replacement method, data value replacement method, an existing program analyzing method, software development management method, a parallel computer, a judgment assisting apparatus, software development business method, file determination method, software operational management method, software univocal determination method, consciousness model devising method, algorithm devising method, a program product, and a transmission wave and a paradigm based program

The other objective of this invention is to provide the following eliminating the traditional multi-layered development team system, while setting SE's free from programming to enable them to dedicate to higher professional works: software determination method, software usage method, a recording medium, a processing apparatus, software maintenance method, software transplantation method, software management method, Homogeneity Map creation method, Tense Control Vector creation method, Pallet Function creation method, Pallet area determination method, Pallet Chain creation Function method, Duplication Vector creation method, Homogeneity Vector creation method, Action Vector creation method, software loading method, software development method, data structure replacement method, data value replacement method, an existing program analyzing method, software development management method, a parallel computer, a judgment assisting apparatus, software development business method, file determination method, software operational management method, software univocal determination method, consciousness model devising method, algorithm devising method, a program product, and a transmission wave and a paradigm based program

The other objective of this invention is to provide the following which anyone can maintain easily: software determination method, software usage method, a recording medium, a processing apparatus, software maintenance method, software transplantation method, software management method, Homogeneity Map creation method, Tense Control Vector creation method, Pallet Function creation method, Pallet area determination method, Pallet Chain creation Function method, Duplication Vector creation method, Homogeneity Vector creation method, Action Vector creation method, software loading method, software development method, data structure replacement method, data value replacement method, an existing program analyzing method, software development management method, a parallel computer, a judgment assisting apparatus, software development business method, file determination method, software operational management method, software univocal determination method, consciousness model devising method, algorithm devising method, a program product, and a transmission wave and a paradigm based program

The other objective of this invention is to provide the following enabling to cut software development time overwhelmingly and to bring about a substantial impact upon management: software determination method, software usage method, a recording medium, a processing apparatus, software maintenance method, software transplantation method, software management method, Homogeneity Map creation method, Tense Control Vector creation method, Pallet Function creation method, Pallet area determination method, Pallet Chain creation Function method, Duplication Vector creation method, Homogeneity Vector creation method, Action Vector creation method, software loading method, software development method, data structure replacement method, data value replacement method, an existing program analyzing method, software development management method, a parallel computer, a judgment assisting apparatus, software development business method, file determination method, software operational management method, software univocal determination method, consciousness model devising method, algorithm devising method, a program product, and a transmission wave and a paradigm based program.

The other objective of this invention is to provide the following enabling to entirely change the entity of software assets and to realize management innovation in a true sense: software determination method, software usage method, a recording medium, a processing apparatus, software maintenance method, software transplantation method, software management method, Homogeneity Map creation method, Tense Control Vector creation method, Pallet Function creation method, Pallet area determination method, Pallet Chain creation Function method, Duplication Vector creation method, Homogeneity Vector creation method, Action Vector creation method, software loading method, software development method, data structure replacement method, data value replacement method, an existing program analyzing method, software development management method, a parallel computer, a judgment assisting apparatus, software development business method, file determination method, software operational management method, software univocal determination method, consciousness model devising method, algorithm devising method, a program product, and a transmission wave and a paradigm based program.

The other objective of this invention is to provide the following:
capable of entirely changing a traditional development cost estimate method, from cost-oriented to product-oriented: software determination method, software usage method, a recording medium, a processing apparatus, software maintenance method, software transplantation method, software management method, Homogeneity Map creation method, Tense Control Vector creation method, Pallet Function creation method, Pallet area determination method, Pallet Chain creation Function method, Duplication Vector creation method, Homogeneity Vector creation method, Action Vector creation method, software loading method, software development method, data structure replacement method, data value replacement method, an existing program analyzing method, software development management method, a parallel computer, a judgment assisting apparatus, software development business method, file determination method, software operational management method, software univocal determination method, consciousness model devising method, algorithm devising method, a program product, and a transmission wave and a paradigm based program.

The other objective of this invention is to provide the following not requiring the regulation of database: software determination method, software usage method, a recording medium, a processing apparatus, software maintenance method, software transplantation method, software management method, Homogeneity Map creation method, Tense Control Vector creation method, Pallet Function creation method, Pallet area determination method, Pallet Chain creation Function method, Duplication Vector creation method, Homogeneity Vector creation method, Action Vector creation method, software loading method, software development method, data structure replacement method, data value replacement method, an existing program analyzing method, software development management method, a parallel computer, a judgment assisting apparatus, software development business method, file determination method, software operational management method, software univocal determination method, consciousness model devising method, algorithm devising method, a program product, and a transmission wave and a paradigm based program.

The other objective of this invention is to provide the following enabling to realize a fundamental solution method, different from traditional ones, for the so-called itinerant salesperson problem: software determination method, software usage method, a recording medium, a processing apparatus, software maintenance method, software transplantation method, software management method, Homogeneity Map creation method, Tense Control Vector creation method, Pallet Function creation method, Pallet area determination method, Pallet Chain creation Function method, Duplication Vector creation method, Homogeneity Vector creation method, Action Vector creation method, software loading method, software development method, data structure replacement method, data value replacement method, an existing program analyzing method, software development management method, a parallel computer, a judgment assisting apparatus, software development business method, file determination method, software operational management method, software univocal determination method, consciousness model devising method, algorithm devising method, a program product, and a transmission wave and a paradigm based program.

The other objective of this invention is to open the possibility towards realizing progressive inventions based on a principle of the theory of existence hypothesized by this invention, which is called 'the providence of existence'.

Generally speaking, this invention aims to provide a revolutionary solution to traditional problems of software.

The background of this invention is the theory of Lyee, which enables the determination of a universal nature of software, that is, the one and only software not necessitating personal ability at all, from the stage of determining a requirement to the stage of determining program logic and a data structure. And, as a result, it is made possible to provide software creation apparatus and a software creation method which can improve productivity (the number of development steps and development term), make the quality uniform and ease the maintenance.

## 4. Explanation of the invention

### 4.1 The summary of the invention

In order to solve such problems, this invention has the following features: A first criterion program (Tense Control Vector) to possess a prescribed first universal structure to realize semantic quality , regardless of program's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media; A second criterion program (Pallet Function) to possess a prescribed second universal structure to develop the first criterion program, regardless of program's functionality, into multiple domains, the second universal structure containing the first and the second undefined parts; and A third criterion program (Pallet Chain Function) to possess a prescribed third universal structure to chain the first and the second criterion programs for every unit of the semantic quality and for every said medium, regardless of program's functionality, the third universal structure comprising the first and the second undefined parts, wherein the software is unambiguously determined by substituting identifiers both of the media derived from development requirement of a program to be realized and of the subject obtaining the semantic quality belonging to the media into the first and the second undefined parts, respectively.

The first criterion program possessing a structure to determine semantic quality , the second criterion program possessing a structure to develop this first criterion program into multiple domains, and the third criterion program possessing a structure to chain the first and the second criterion programs for every unit of semantic quality and for every medium are always fixed, regardless of the content of the semantic quality to be realized, that is, the functionality to be realized, until the identifiers both of the media and of the subject obtaining the semantic quality are substituted into the first and the second undefined parts, respectively, and they possess a prescribed universal structure which inevitably delivers the Scenario Function concerned with this invention. Therefore, these three kinds of criterion programs are applied to all software. At the same time, any software has the constituent of only these three kinds of criterion programs. Because of this, any software can be written with a prescribed universal structure, and a software requirement and a program, which is a result product, can be determined simultaneously.

Moreover, those subtracted into the first and the second undefined parts are only 'identifiers', and all needed for that substitution are the extraction both of the media and of the subject obtaining the semantic quality on the media and the assignment (naming) of identifiers. So, as long as the naming operates on a rule (which is easy to attain), there is no room for an entry of arbitrariness in the completion of the three kinds of criterion programs made by the above-mentioned method.

This invention has another feature that the media is at least either one of monitor screen, Printouts and file. What we call media is conclusively what performs an intermediary role of input and output between a human and a computer. It is realized, for example, as monitor screen, Printouts, file, etc.

These media is regarded as simply something on which a set of words contained in a development requirement issued by the development-requiring party is grouped and put together. That is, the logic structure of the depths of consciousness controlling the issuance of words as a development requirement of the development-requiring party corresponds to this invention's program (source code), and only when the program has run, development requirement's words will embody for the first time via media. This is a basic thinking taken herein. In other words, an object program, so to speak, is exactly what possesses a prescribed common and universal structure with only differences in identifiers both of the media and of the subject obtaining semantic quality for any and all (kinds of) software. The moment such object program (source code) is 'run' and semantic quality has been correctly set to all of the semantic quality obtaining subject, a state of 'a development requirement of the development-requiring party has been satisfied by software' is actually materialized.

Identifiers to identify the media are a kind of independent variables, and by substituting them into a function representing a mechanism of forming a meaning structure, a program possessing the above-mentioned prescribed common and universal with only differences in the variables is determined. This means that software possessing the prescribed common and universal structure is determined unambiguously for realizing such development requirement, and it leads to a conclusion that it is never affected by the arbitrariness. The reason it is 'determined unambiguously it that the extraction of 'words' contained in a development requirement (in Lyee, semantic quality obtaining subjects are called 'words') is ruled by the two-value logic of 'exist or not exist', thus enabling the unambiguously processing (that is, no room for an entry of arbitrariness), the same applying for media, too, and that, the constituent of the other criterion programs is identical no matter what kind of programs are intended to make. So, the conclusion 'not affected at all by the arbitrariness' stands on the same reason as mentioned above.

This invention has the other feature that a unit of establishing semantic quality can be regarded as nothing but words belonging to the media in the real sphere of a computer.

'Words', referred herein, are words as development requirement which was actually given out caused by being of semantic in the depths of consciousness of the development-requiring party: By realizing a structure rule of thinking logic of the depths of consciousness as a program in the real sphere of a computer, a unit enabling to form semantic quality is materialized via media such as screen, Printouts, etc. For example, 'word' is materialized by input and output columns on the screen in the software to be realized, data fields of Printouts, etc. Same as above, by treating these words as a kind of independent variables and by substituting them into a function representing a mechanism of forming a meaning structure, a program possessing the above-mentioned prescribed common and universal structure, with only differences in the variables, is determined. As a result, software possessing the prescribed common and universal structure is unambiguously determined.

Also, this word is determined by a rule of the semantic quality -forming unit on media, providing no room for an entry of arbitrariness. So, an entry by SE of extra words, other than semantic quality establishing words on the media for the production convenience can be entirely excluded, whereas extra words had always been mixed in software production and caused a variety of errors. Thus, software is unambiguously determined.

This invention has the other feature that a latent unit of forming semantic quality (that is, data item on file), which materialized a word that is actualized semantic quality as a development requirement by the development-requiring party, is univocally obtained by substituting an identifier of the media into an independent variable of Scenario Function which is a functional expression of a mechanism to induce from a data code the unique semantic quality which assumes on the data code. A word that is a unit for establishing semantic quality can inevitably be drawn by substituting an identifier the media into an independent variable of Scenario Function, thus with no omission. Moreover, it can be obtained by the solution by a function, the way which leaves no room for the entry of SE's arbitrary elements. Thus, in the course of the definition of semantic quality in software production, the human dependencies can be excluded.

This invention has the other feature that the structures of the first, the second and the third criterion programs are created based on a paradigm which simulates on a computer a 'meaning-recognition structure' of recognizing a meaning from the aforementioned semantic quality . By 'meaning-recognition structure of recognizing a meaning from semantic quality ' is meant a paradigm where, against the unique 'semantic quality ' (the origin of forming a word meaning) materialized as 'semantic quality ' of a word on media, a human attaches an interpretation of meaning in his own way. This 'paradigm' is the one the inventor of the present invention established in the course of making this invention. Based on a program paradigm of such structure, the structures of the first, the second and the third criterion programs are determined, therefore, the human dependencies can be excluded from the criterion programs as well as an object program produced.

This invention has the other feature that the structures of the first, the second and the third criterion programs are identified by the Scenario Function which is a functional expression of a mechanism to induce from a data code the unique semantic quality which assumes on the data code.

The structures of the first, the second and the third criterion programs also can be obtained by a rule of the Scenario Function which leaves no room for the entry of SE's arbitrary elements, thus, in the course of the definition of semantic quality in software production, the human dependencies can be excluded.

The present invention has the other feature that under this mechanism, semantic quality which has materialized in a Consciousness meaning-space existing in the depths of consciousness is inherited uniquely into Definite meaning-space, Event meaning-space and Equivalence meaning-space (which are hypothesized by this invention), and what is recognized as a meaning is a difference between what this inherited semantic quality has made a grouping into the Natural meaning-space and what the other semantic quality has made a Coupling into.

Such a mechanism can be implemented as a base for all software to form a meaning, without exception. This means that all software can be determined by the same structure, regardless of the content of function to be realized. Because of this, fundamental renovations can be invited, which could not be achieved conventionally in software production, debugging, etc.

This invention has the other feature that when L2 (k,i) represents first Tense Control Vector (WO2 Homogeneity Vector) which primarily induces semantic quality of a word plotted on WO2 Pallet simulating, on a computer, the Definite meaning-space hypothesized by this invention; Y3 (k,i) represents second Tense Control Vector (the former Y3 (k,i); WO3 Duplication Vector, the latter L3 (d,i): WO3 Homogeneity Vector) which primarily induces semantic quality of a word plotted on WO3 Pallet simulating, on a computer, the Event meaning-space hypothesized by this invention; Y4 (k,i) represents third Tense Control Vector (the former Y4 (k,i): WO4 Duplication Vector, the latter L4 (k,i); WO4 Homogeneity Vector) which primarily induces semantic quality of a word plotted on WO4 Pallet simulating, on a computer, the Equivalence meaning-space hypothesized by this invention; 'Φp{,}k' represents Pallet Function which gathers, regardless of their orders, the Tense Control Vectors, such Vectors being components enclosed by '{' and '}', for the same times as denoted by 'k' or rather for all the times as represented by the system in case 'k' is lacking; 'k' represents an identifier of media; 'i' represents an identifier of a word regarded as a unit for forming semantic quality ; Φ 0( + + + ) represents Pallet Chain Function which links (+) the Pallets, which are components inside the (), and are processes to induce semantic quality via Definite meaning-space, Event meaning-space and Equivalence meaning-space, Scenario Function is expressed by the following:

$$T0 = \Phi 0 (+ \{\Phi p\{\quad , L2 (k,i)\} \}k$$

$$+ \Phi p\{Y3(k,i), L3 (k,i)\}$$

$$+ \{\Phi p\{Y4(k,i), L4(k,i)\}\}k).$$

The aforementioned Scenario Function is induced from the providence of existence which is a universal mechanism applicable to all meaning phenomenon. As this Scenario Function can be applied regardless of software function, languages, environments, et al, a prescribed software can be determined by an algebraic solution of only substituting applicable identifiers into the independent variable parts of the Scenario Function which possesses a prescribed universal structure.

The present invention has the other feature that Tense Control Vector (L2 (k,i): WO2 Homogeneity Vector) expressed by L2 (k,i) on WO2 Pallet, which has simulated the Definite meaning-space on a computer, comprises a first step to confirm whether a data code exists in a data field to be identified by 'i' belonging to a Pallet of media identified by 'k'; a second step, when a data code exists in the data field in the first step, to set a processing route thereafter (a Pallet identifier linking thereafter) in case the word identified by; relates to command, or to confirm whether the data code's attribute accords with a prescribed attribute in case the word is not related to command.; and a third step to initialize a flag indicating a refusal state of the second step when the second step is valid.

Tense Control Vector named WO2 Homogeneity Vector is what has mainly simulated to the letter on a computer, a logic of, the Definite meaning-space of the mechanism, that is, 'Definite meaning-space is a space satisfying a rule of Definite Chain which discloses in Consciousness Chain forming a The Kuh (mentioned later).' Concretely, the first step confirms whether Definite Chains semantic quality is formed in the data field identified by i on the self Pallet identified by k, and the second step confirms whether, in case of the semantic quality not being formed in the first step, a condition is met or not to form Consciousness Chain which reversibly establishes the Kuh (that is, whether an attribute of the data code in the data field accords with an prescribed attribute or not).

Accordingly, there is no room for SE's arbitrariness to enter into the Tense Control Vector named WO2 Homogeneity Vector. Further, in WO2 Homogeneity Vector, in either of its first to third steps, an object of their information processing is only the data field of itself, which enables an autonomous and independent processing. Therefore, even if some modifications, etc. one needed to a certain program, locations to be modified for data codes of a finished software are not dispersed but limited, thus to discover them is easy and a maintenance-friendly system can be built. That is, a chain-reaction situation in debugging common in the traditional technologies, such as a case where a modification of first data field necessitates a modification of another spot, can be avoided completely.

The present invention has the other feature that Tense Control Vector (Y3 (k,i): WO3 Duplication Vector) expressed by Y3 (k,i) on WO3 Pallet, which has simulated the Event meaning -space on a computer, comprises a first step to confirm whether a data code exists in a data field to be identified by 'i' belonging to WO2 Pallet of media identified by 'k'; and a second step to duplicate, when the data code is present in the data field in the first step, the data code into a data field identified by 'i' belonging to the self Pallet of media identified by 'k'.

Tense Control Vector named WO3 Duplication Vector is what has simulated, on a computer, a disclosure rule of Definite Unit-Link included in the mechanism which sets Event meaning-space as a space satisfying not only Definite Chains disclosure rule disclosing for Consciousness Chain where the Kuh is established, but also a rule of Event Unit-Link that is formed by an association from Consciousness Unit-Link. Specifically, the first step confirms whether semantic quality is formed of Definite Unit-Link identified by 'k' and 'i' on WO2 Pallet, identified by 'k' (that is, whether data is present or not) and the second step establishes, if semantic quality has not been formed in the first step (that is, if a data code is present in the data field identified by 'k' and 'i' on WO2 Pallet identified by k), Consciousness Unit-Link in which 'the Kuh' is reversibly established (that is, to duplicate the data code into the data field identified by 'k' and 'i' on WO2 Pallet identified by 'k').

Accordingly, there is no room for SE's arbitrariness to enter into the Tense Control Vector named WO3 Duplication Vector. Further, in WO3 Duplication Vector, in either of its first and second steps, an object of their information processing is only the self data field, thus enabling an autonomous and independent processing. Therefore, even if some modifications, etc. are needed to a certain program, locations requiring modifications in data codes of a finished software are not dispersed but limited, thus to discover them is easy and a maintenance-friendly system can be built. That is, a chain-reaction situation in developing common in the traditional technologies, such as a case where a modification of a first data field necessitates a modification of another spot, can be avoided completely.

The present invention has the other feature that Tense Control Vector (L3 (k,i): WO3 Homogeneity Vector) expressed by L3 (k,i) on WO3 Pallet, which has simulated the Event meaning-space on a computer, comprises : a first step to confirm whether a data code exists in a data field to be identified by 'i' belonging to self Pallet of media identified by 'k'; a second step to assume, when the data code is not present in the data field in the first step, semantic quality as a data code into the data field either by substituting from a data code existing in the data field identified by i belonging to the other media or by calculating using a data code existing in the data field identified by an identifier not always the same as the 'i'. (this is called 'Self-decision'. Same herein after, unless denoted otherwise.); and a third step, when the second step has been completed, to judge whether to legitimate the assumed semantic quality, to set a flag indicating whether to restart assuming semantic quality only by the other Tense Control Vector's data link in case of judging as legitimate, and to initialize a flag indicating Refusal of the second step.

Tense Control Vector named WO3 Homogeneity Vector has simulated, on a computer, a rule of Event Unit-Link included in the mechanism which sets Event meaning-space as a space satisfying not only Definite Unit-Link's disclosure rule disclosing for Consciousness Unit-Link where the Kuh is established but also a rule of Event Unit-Link that is formed by an association from Consciousness Unit-Link. Specifically, the first step confirms whether or not Event Unit-Link can be formed in a data field identified by 'k' and 'i' on the self Pallet by an association from Consciousness Unit-Link (that is, either a data code is not present, or this self address is equal to this self address); the second step induces if the association has been established in the first step (that is, if a data code is not present in the data field identified by 'k' and 'i' on the self Pallet), semantic quality (Self-decision) of Consciousness Unit-Link where the Kuh is established by Event Unit-Link, into the data field identified by 'k' and 'i' on the self Pallet.

Accordingly, there is no room for an entry of SE's arbitrariness into the Tense Control Vector named WO3 Homogeneity Vector. Further, with WO3 Homogeneity Vector, in either of its first and second steps, an object of their information processing is only the data field of itself, thus, an autonomous and independent processing is enabled. Therefore, even if some modifications, etc. are needed to a certain program, locations requiring modifications in data codes of a finished software are not dispersed but limited, thus to discover them is easy and a maintenance-friendly system can be built. That is, a chain-reaction situation in debugging common with traditional technologies, such as a case where a modification of a first data field necessitates a modification of another spot, can be avoided completely.

Further, The present invention has the other feature that Tense Control Vector (Y4 (k,i): WO4 Duplication Vector) expressed by Y4 (k,i) on WO4 Pallet, which has simulated the Equivalence meaning-space on a computer, comprises: a first step to confirm whether a data code exists in a data field to be identified by i belonging to WO2 Pallet of a media identified by 'k'; a second step to duplicate, when the data code is present in the data field in WO2 Pallet in the first step, the data code into the data field identified by 'i' belonging to self Pallet of a media identified by k; a third step to confirm, when the data code is not present in the data field in WO2 Pallet in the first step, whether a data code exists in a data field identified by i belonging to WO3 Pallet of a media identified by 'k'; and a fourth step to duplicate, when the data code is present in the data field in WO3 Pallet in the third step, the data code into the data field identified by i belonging to the self Pallet of a media identified by 'k'.

Tense Control Vector named WO4 Duplication Vector is what has simulated, on a computer, a rule of breakup from the mechanism that sets Equivalence meaning-space as a space satisfying not only a breakup rule of Event Unit-Link which induced semantic quality of Consciousness Unit-Link where the Kuh is established, but also a rule of Equivalence Unit-Link formed by Regulation and Coupling.

Specifically, the first step confirms whether the semantic quality has been established, in the data field identified by 'k' and 'i' on WO2 Pallet identified by 'k' (which reversibly established the Kuh, that is, whether a data code is present or not.); the second step causes, when the semantic quality has been established in the first step (that is, a data code is present in the data field identified by 'k' and 'i' on WO2 Pallet identified by 'k'), a breakup of the semantic quality forming Consciousness Unit-Link where the Kuh is reversibly established, (that is, to duplicate the data code into the data field identified by 'k' and 'i' on the self Pallet.); the third step confirms, when the semantic quality has not been formed in the first step (that is, a data code is not present in the data field identified by the 'k' and 'i' on WO2 Pallet identified by 'k'.), whether or not Event Unit-Link has been formed which induced semantic quality to form Consciousness Unit-Link where the Kuh is reversibly established, in the data field identified by 'k' and 'i' on WO3 Pallet (that is, whether a data code is present or not); and the fourth step causes a breakup of the semantic quality forming Consciousness Unit-Link where the Kuh is irreversibly established (that is, to duplicate the data code into the data field identified by 'k' and 'i' on the self Pallet.) when, Event Unit-Link has been formed which induced semantic quality forming Consciousness Unit-Link where the Kuh is irreversibly established in the data field identified by 'k' and 'i' on WO3 Pallet (that is, a data code is present).

Accordingly, there is no room for an entry of SE's arbitrariness into the Tense Control Vector named WO4 Duplication Vector. Further, in WO4 Homogeneity Vector, in any of its first to fourth steps, an object of their information processing is only the data field of itself, thus, an autonomous and independent processing is enabled. Therefore, even if some modifications, are needed to a certain program, locations requiring modifications in data codes of a finished software are not dispersed but limited, thus to discover them is easy and a maintenance-friendly system can be built. That is, a chain-reaction situation in debugging common in the traditional technologies, such as a case where a modification of a first data necessitates a modification of another spot, can be avoided completely.

The invention has the other feature that, Tense Control Vector (L4(k,i): WO4 Homogeneity Vector) expressed by L4(k,i) on WO4 Pallet, which has simulated the Equivalence meaning-space on a computer, comprises: a first step to confirm whether a data code exists in a data field identified by i belonging to the self Pallet of a media identified by k; a second step to implement a concrete editing of the data code, when the data code is present in the data field in the first step; and a third step to examine, when the concrete editing is refused in the second step, whether the attribute check of WO2 Homogeneity Vector is Refusal or whether the Self-creation of WO3 Homogeneity Vector is Refusal, and to determine the cause of the Refusal and implement the concrete editing of the cause of Refusal.

Tense Control Vector named WO4 Homogenizing vector is what has simulated, on a computer, a rule of Equivalence Unit-Link which is formed by Regulation and Coupling of the mechanism that sets Equivalence meaning-space as a space satisfying not only a breakup rule of Event Unit-Link which induced semantic quality of Consciousness Unit-Link where the Kuh is established but also a rule of Equivalence Unit-Link formed by Regulation and Coupling.

Specifically, the first step confirms whether Equivalence Unit-Link can be formed or not in the data field identified by k and i on the self Pallet, corresponding to Regulation and Coupling on occasion of a breakup from Event Unit-Link (that is, whether a breakup data code is present and is able to implement the concrete editing.); the second step regulates, when the breakup has been realized in the first step (that is, a data code is present in the data field identified by k and i on the self Pallet.), the semantic quality of Consciousness Init-Link where the Kuh is established by Equivalence Unit-Link (that is, to implement the concrete editing of the data code) into the data field identified by k and i on the self Pallet.

Accordingly, there is no room for an entry of SE's arbitrariness into the Tense Control Vector named WO4 Homogeneity Vector. Further, in WO4 Homogeneity Vector, in either of its first to third steps, an object of their information processing is only the data field of itself, thus, an autonomous and independent processing is enabled. Therefore, even if some modifications are needed to, etc. of a certain program, locations requiring modifications in data codes of a finished software are not dispersed but limited, thus to discover them is easy and a maintenance-friendly system can be built. That is, a chain-reaction situation in debugging common in the traditional technologies, such as a case where a modification of a first data field necessitates a modification of another spot can be avoided completely.

The present invention has the other feature that when L2 (k,i) represents Tense Control Vector (WO2 Homogeneity Vector) which unambiguously induces semantic quality of WO2 Pallet simulating the Definite meaning-space on a computer; Y3 (k,i) and L3 (k,i) represent Tense Control Vector (the former Y3 (k,i): W03 Duplication Vector, the latter L3 (d,i): WO3 Homogeneity Vector) which unambiguously induce semantic quality of WO3 Pallet simulating the Event meaning-space on a computer; Y4(k,i) and L4(k,i) represent Tense Control Vector (the former Y4(k,i): WO4 Duplication Vector, the latter L4(k,i): WO4 Homogeneity Vector) which unambiguously induce semantic quality of WO4 Pallet simulating the Equivalence meaning-space on a computer; 'Φp{,}k' represents Pallet which collects, for the same amount as k or for all the system in case there is work, Tense Control Vectors which are components enclosed by '{' and '}', which that collection having no condition of their order ; The k represents an identifier of media; i represents an identifier of a word regarded as a unit for forming the semantic quality ; Φ 0(+ + + ) represents Pallet chain function which links (+) the Pallets, which are components inside the (), which is a process to induce semantic quality via Definite meaning-space, Event meaning-space and Equivalence meaning-space; T1(f) represents Scenario function in a case where the kind of media includes Printout and file as well; and P2(j), P3(j) and P4(j) respectively represent Action Vectors with a compensating logic structure when simulating on a computer a mechanism in WO2 Pallet, WO3 Pallet and WO4 Pallet, respectively, then, Scenario function is expressed by the following:

$$T0 = \Phi 0 (+ \{\Phi p \{ \quad , L2(k,i) , P2(j)\} \}k$$

$$+ \Phi p \{Y3(k,i) , L3(k,i) , P3(j), T1(f)\}$$

$$+ \{\Phi p \{Y4(k,i) , L4(k,i) , P4(j)\}\} k).$$

The aforementioned Scenario function is delivered from the providence of existence which is a universal mechanism applicable to all meaning events, and this Scenario function can be applied regardless of software functionality, languages, environments, et al. Therefore, a software which need to be developed can be determined by an algebraic solution by only substituting applicable identifiers into the independent variable part of the Scenario function which possesses a prescribed universal structure. Moreover, this Scenario function introduces TO and TI as above, sets their differences as those in kinds of objective media, thus, becomes applicable to not only online but also batch process.

Further, in simulating on a computer the universal mechanism of the providence of existence a stricter and applicable software production technology can be built by introducing a concept of Action Vector which possesses a compensating logic structure.

Also, the present invention has the other feature that the first criterion program has a logical structure which enables:

(1) To duplicate significance of the said word existing in the first domain in the multiple domains as semantic quality of the word existing in the second domain concerned in the aforementioned multiple domains; and
(2) To induce semantic quality either by substituting or calculating from the semantic quality of a word in the other domain than the first domain.

That is, in the first criterion program, data code of only the self data field is treated as an object to create, and there is no change made to data code's value in a data field having an identifier which is not the self identifier. Thus, independence can be kept. By this, the condition of creating an order of data code creation of words between criterion programs is eliminated. Accordingly, a step for checking an order conditions is no longer needed, thus, a logic coupling based on the order can exactly be eliminated.

That is, even if the order of a certain program unit (a first criterion program corresponding to word A on some media) and another program unit (a first criterion program corresponding to word B on the same media) is replaced on a source code created by Lyee's method, since there is no dependent relationship between key programs there is, no affect upon a program. For example in the above, assuming data of 'B' can be obtained by doubling data of 'A', it is clear that there is no problem if a criterion program of 'A' is located before that of 'B'. But even if the order is reversed, a flag is set indicating Restart or not Restart in the first criterion program of 'A' in order for the first criterion program of 'B' to actualize semantic quality inducement only by data coupling, and the program repeats Restart until the semantic quality is set to 'B'. So, there is no hindrance in program as a result. This feature is realized only because there is no dependence between the first criterion program of 'A' and that of 'B', which makes them independent from each other. This means that SE's unique and personal thinking logic buried between lines of each statement of a source program list realized by the traditional methods has been removed in the case of Lyee, which consequently leads to the cancellation of a black box.

Further, the present invention of the other feature that the Domain is either one of the following, based on a mechanism in which semantic quality formed in Consciousness meaning-space in the depths of consciousness is inherited as the only one in Definite meaning-space, Event meaning-space and Equivalence meaning-space, and differences between this inherited semantic quality Coupling in Natural meaning-space and the other the inherited semantic quality Coupling therein is recognized as a meaning: WO2 Pallet which has simulated Definite meaning-space on a computer; WO3 Pallet which has simulated Event meaning-space on a computer; and WO4 which has simulated Equivalence meaning-space on a computer.

That is, a domain is among WO2, WO3 and WO4 Pallets which are the consequence of the mechanism, and there are no other elements. Based on this mechanism, the duplication of data code from WO4 Pallet to WO2 Pallet is entrusted to a human as a behavior based on human's thinking logic, and it is excluded from program logic. Therefore, different from the traditional software production which assembled human roles into a program as a formatted program logic based on the knowledge of SE's personal ability and experience this invention can exclude from a program, the uncertainty that the source code of an aimed program is affected by human's personal recognition and the behavior occurring thereabouts. After all, a program can be made independent and free from arbitrariness.

Also, the present invention has the other feature that the second criterion program put together regardless of the processing order by words, homogeneous Tense Control Vector s of the same kind, per each domain in multiple domains

That is, the Pallet Function, which is a second criterion program, does not need to take into account the processing order for every word, as from the same reason as above, the logical structure created by assembling the order into logic which should have been unnecessary, can be eliminated. Thus, it is possible to produce an identical program excluding arbitrariness no matter who did the coding. Additionally, this Pallet Function, a second criterion program, can be coded only by placing Tense Control Vector into an adequate location, not requiring to consider up to its activation. This is because it begins to operate when the step counter reached a location bound by a principle of a computer. For this, a logical structure of Tense Control Vector becomes simple, not requiring the tracing of program list upon debugging, etc.

Further, the present invention has the feature that Pallet Chain function, which is a third criterion program, comprises the following:

A 1st step to determine send information to be displayed on Screen in a system; A 2nd step to examine a data code in the data field recording an identifier of Pallet to be activated next; A 3rd step to set all Pallets within the Synchronization range as an activation object when it is needed to return to the menu screen corresponding to such screen based on the result of the 2nd step; A 4th step to initialize a corresponding data field when needed; A 5th step to activate a corresponding WO4 Pallet; A 6th step to send data code edited by the WO4 Pallet in the 5th step to a corresponding screen; A 7th step to receive command and data code instructed on the corresponding screen; A 8th step to activate a corresponding WO2 Pallet; A 9th step to activate WO3 Pallet or Pallet Chain function of T1 when needed; and A 10th step to repeat from the 1st step to the 9th step endlessly until the system is closed.

Likewise, the third criterion program, that is, Pallet Chain function, possesses a prescribed universal structural rule which faithfully simulates the existence of providence on a computer. So, the personality can be excluded from a program.

That is, these 1st to 10th steps are universal regardless of the content of program to be realized and to be produced, and their structures have been determined in advance. And, even if they are to be coded, they can be determined as unique. So, such 'logic' as created traditionally into program logic by SE's and understood only by those who made it, that is, the arbitrariness, can be excluded. Also, the present invention has the other feature that it possesses the following: A first criterion program (Tense Control Vector), to possess a prescribed a first common structure for every semantic quality belonging to media intervening a computer or an OS (operating system) , on which a software to be produced operates, the first common structure comprising a first undefined part to be filled with an identifier of the media and a second undefined part to be filled with another identifier of a subject obtaining the semantic quality existing on the media; A second criterion program (Pallet Function), to possess prescribed second universal structure to develop the first criterion program, regardless of program's functionality, into multiple domains, the second universal structure containing the first undefined part to be filled with the identifier of the media and the second undefined part to be filled with the other identifier of the subject obtaining the semantic quality existing on the media; and A third criterion program (Pallet Chain Function), to possess a prescribed third universal structure to chain the first and the second criterion programs for every unit of the semantic quality and for every said medium, regardless o program's functionality, the third universal structure comprising the first undefined part to be filled with the identifier of the media and the second undefined part to be filled with the other identifier of the subject obtaining the semantic quality existing on the media, wherein a software is unambiguously determined by substituting, identifiers both of the media devised from development requirement of a program to be realized and of the subject obtaining the semantic quality belonging to the media into the first and the second undefined parts, respectively and wherein software maintenance can be achieved only by the correction and modification of the identifiers and the calculation equation of the media and of the subject obtaining the semantic quality in the 1st to 3rd criterion programs.

As the structure of software of this invention is universal, therefore, primary, the software maintenance does not require to change so-called logical structure, and by simply making corrections and modifications of identifiers of words and media (Definitive) that have already been substituted into the structure, that maintenance work is completed. Therefore, it brings about a sudden change in the debug work which required a huge amount of time and labor to discover locations for modification as well as to prepare alternative logic. In other words, a logic has been wiped out from the debug work, thus, an extraordinary efficiency can be actualized in the work.

Additionally, the present invention has the other feature that it possesses the following: A first criterion program (Tense Control Vector), to possess a prescribed a first common structure for every semantic quality belonging to media intervening a computer or an OS (operating system), on which a software to be produced operates, the first common structure comprising a first undefined part to be filled with an identifier of the media and a second undefined part to be filled with another identifier of a subject obtaining the semantic quality existing on the media; A second criterion program (Pallet Function), to possess prescribed second universal structure to develop the first criterion program, regardless of program's functionality, into multiple domains, the second universal structure containing the first undefined part to be filled with the identifier of the media and the second undefined part to be filled with the other identifier of the subject obtaining the semantic quality existing on the media; and A third criterion program (Pallet Chain Function), to possess a prescribed third universal structure to chain the first and the second criterion programs for every unit of the semantic quality and for every said medium, regardless o program's functionality, the third universal structure comprising the first undefined part to be filled with the identifier of the media and the second undefined part to be filled with the other identifier of the subject obtaining the semantic quality existing on the media, wherein a software is unambiguously determined by substituting, identifiers both of the media devised from development requirement of a program to be realized and of the subject obtaining the semantic quality belonging to the media into the first and the second undefined parts, respectively, and wherein a stage on which the computer operates is migrated to a second computer or another OS, while maintaining the logical structure of the 1st to 3rd criterion programs.

A logical structure of the criterion programs of this invention is universal, that is, fixed, not dependent upon a computer to operate, OS, environments, etc. So, for system migration, the change of identifiers becomes a main job, while the part of programs' set can be replaced mechanically. Thus, the room for the occurrence of bugs can be eliminated.

Also, the present invention has the other feature that it possess the following: A first criterion program (Tense Control Vector), to possess a prescribed a first common structure for every semantic quality belonging to media intervening a computer or an OS (operating system) , on which a software to be produced operates, the first common structure comprising a first undefined part to be filled with an identifier of the media and a second undefined part to be filled with another identifier of a subject obtaining the semantic quality existing on the media; A second criterion program (Pallet Function), to possess prescribed second universal structure to develop the first criterion program, regardless of program's functionality, into multiple domains, the second universal structure containing the first undefined part to be filled with the identifier of the media and the second undefined part to be filled with the other identifier of the subject obtaining the semantic quality existing on the media; and A third criterion program (Pallet Chain Function), to possess a prescribed third universal structure to chain the first and the second criterion programs for every unit of the semantic quality and for every said medium, regardless o program's functionality, the third universal structure comprising the first undefined part to be filled with the identifier of the media and the second undefined part to be filled with the other identifier of the subject obtaining the semantic quality existing on the media, wherein a software is unambiguously determined by substituting, identifiers both of the media devised from development requirement of a program to be realized and of the subject obtaining the semantic quality belonging to the media into the first and the second undefined parts, respectively, and wherein the semantic quality unit and the media identifier corresponding to the criterion program are managed while maintaining the logical structure of the 1st to 3rd criterion programs. Further, for software assets management, as a structure of the criterion programs of this invention is universal, i.e., fixed and autonomous, the logical structure part is outside of what is to be practically managed; only identifiers are to be managed. For this, objects for assets management can be dramatically reduced and limited, while achieving extraordinarily efficiency in management.

Also, the present invention has the other feature that, so as to satisfy a mechanism in which semantic quality is formed in a Consciousness meaning-space in the depths of consciousness is inherited as the only one into Definite meaning-space, Event meaning-space and Equivalence meaning-space, and has turned into a Coupling in Natural meaning-space, then it is recognized as a meaning, software's requirement definition not only is fulfilled with Homogeneity map but also is satisfied only with this Homogeneity map by means of placing multiple domains, for every word of a software to be produced, each of the domains containing criterion programs which possess a prescribed universal structure.

That is, by placing domains called Pallets so that a mechanism called the providence of existence as advocated by this invention be satisfied, the main part of the Homogeneity map is instantly completed. Also, a Homogeneity map completed this way can be regarded as a requirement definition document that contains a rule possessed by Scenario function, that is, the condition of all steps of the 1st to the 3rd criterion programs. It is a genuine requirement definition document at the same time.

Consequently, it means to eliminate the upper-stream work step of the traditional design so-called the creation of the requirement definition document, for which extraordinary time and labor was needed and on which SE's personality was heavily reflected upon completion. This brings about, namely, a fundamental change into software production.

Further, the present invention has the other feature that when independent variable in Scenario function which is an expression of the mechanism to induce from a certain meaning unique semantic quality that is on origin to form a meaning is Screen as for media and Word belonging to the screen as for the semantic quality obtaining media, multiple domains possess a first domain (WO4) to implement specific editing of information to activate human's thinking logic and a second domain (WO2) to accept the semantic quality of word formed by the human's thinking logic activated based on the information, wherein a processing route is determined by a control word which is identified via Screen between the first and the second domains.

The meaning of 'when independent variable in Scenario function is Screen as for media and Word belonging to the screen as for the semantic obtaining media' is interpreted as a case of a program concerned with Scenario function T0 founded of a Screen , i. e. case of so-called on-line program. Also, the first domain (WO4) is a domain possessing function to bridge the gap between this providence and human recognition via words belonging to Screen in order to identify semantic quality present in Consciousness meaning-space in the depths of consciousness, and this is a virtual meaning-space advocated by this invention. The second domain (WO2) is a domain possessing function to reversibly establish word's semantic quality as the one in Consciousness meaning-space in the depths of consciousness, and this is a virtual mean-space advocated by this invention. Also, the control word means what possess function to assign a meaning, and it includes, for example, operation keys and command buttons.

By the control word specified via Screen between the first and the second domains, a processing route is determined autonomously, and the arbitrariness is excluded from the determination of the processing route.

Also, the present invention has the other feature that when independent variable, in Scenario function which is an expression of the mechanism to induce from a certain meaning unique semantic quality that is an origin to form a meaning, is File or Printouts as to media and Word belonging to the File or Printouts as to semantic quality obtaining media, multiple domains possess a first domain (WO4) to implement recording of semantic quality onto File or Printouts which corresponds to memory being a root of human recognition and a second domain (WO2) to make reference to File which corresponds to awaking the semantic quality recorded, wherein a processing route is determined by whether the semantic quality exists or not between the first and the second domains.

The meaning of 'when independent variable in Scenario is File or Printouts as for media and Word belonging to the File or Printouts as for the semantic quality obtaining media is interpreted as a case of a program concerned with Scenario function T1 founded on a File or Printouts; a case of so-called off-line program. Also, the first domain (WO4) in this instance is a domain to simulate the function of memory which rules the basis of human recognition on a computer, and this is a virtual meaning-space advocated by this invention. The second domain (WO2) is a domain possessing functional to awaken semantic quality of word latent in Consciousness meaning-space in the depths of consciousness, and this is a virtual meaning-space advocated by this invention. A processing route is determined by the presence or not of the data sent/received via File or Printouts between the first and the second domains, and the arbitrariness excluded from the determination of a processing route.

Further, the present invention has the other between that when independent variable in Scenario function which is an expression of the mechanism to induce from a certain meaning unique semantic quality that is an origin to form a meaning is Screen, File or Printouts as for media and Word belonging to the Screen, File or Printouts as for the semantic quality obtaining media, multiple domains possess a first domain (WO4) act as an interface with human recognition to implement memory which is a root of human recognition and a second domain (WO2) to establish semantic quality of a word, wherein for the part where the word is present on Screen, a processing route is determined by the control word specified via Screen between the first and the second domains, and for the part where the word is present on File or Printouts, the processing route is determined only by whether the semantic quality exists between the first and the second domains.

The meaning of 'when independent variable in Scenario is Screen, File or Printouts as for media and Word belonging to the Screen, File or Printouts as for the semantic quality obtaining media' means a case of a program where on-line and off-line are mixed up. Also, the first domain (WO4) in this instance is a domain to simulate, on a computer, the function of implementing specific editing of the information to bridge the gap between this providence and human recognition via words belonging to Screen in order to identify the semantic quality present in Consciousness meaning-space in the depths of consciousness or the function of memory which rules a basis of human recognition, and this is a virtual meaning-space advocated by this invention. The second domain (WO2) is a domain possessing function to reversibly establish word's semantic quality as Consciousness meaning-space in the depths of consciousness, and this is a virtual meaning-space advocated by this invention.

The Homogeneity Map is a requirement definition unique to this invention, which expresses, in drawing, a solution solved only by substituting Definitives and word identifiers into the independent variable part of Scenario function. Being nothing but solving a function, software requirement can be determined primarily. In a case of a program where on-line and off-line are mixed up, processing route is autonomously determined by the control word identified via Screen between the first and the second domains as well as by whether exists a data code sent received via File or Printouts between the first and the second domains, thus, the arbitrariness is excluded from the determination of a processing route. Also, routes in this instance are only those as follows which are explained later: ' Restart Chain', 'Continuous Chain', 'Duplicate Chain' and 'Multiplex Chain'.

Also, the present invention has the other feature that software to be produced be placed onto a Pallet with three domains by appropriately selecting: a 1st program (Homogeneity Vector) to establish semantic quality to word for every word in the software; a 2nd program (Duplication Vector) to combine word's semantic quality between Pallets; and a 3rd program (Action Vector) to execute various actions corresponding to the software.

That is, Pallet Function ignores a processing order of every word. Thus, the intrinsically unnecessary logical combination, caused by bringing an order rule into logic, can be excluded. Thus, no matter who coded it, the identical program excluding the arbitrariness can be realized. In addition, for Pallet Function which is the 2nd criterion program, Tense Control Vector is only placed at a proper location and it is not necessary to code argument operation or starting order process, etc. taking into account the start conditions. This is because Tense Control Vector operates autonomously when its turn comes in accordance with a principle of a computer, by which semantic quality is autonomously accused. Owing to theses features, a logical structures of Pallet Function and Tense Control Vector are simplified, which makes it unnecessary to trace a logical structure upon debugging, etc.

Further, the present invention has the other feature that, the order of placement of the 1st, 2nd, and 3rd programs based onto the Pallet is free in the creation method of Pallet Function.

Further, the present invention has the other feature that, the order of placement of the 1st, 2nd, and 3rd programs based onto the Pallet is free in the creation method of Pallet Function.

That is, the intrinsically unnecessary logical combination, caused by bringing an order rule into logic, can be excluded. Thus, no matter who coded it, the identical program excluding the arbitrariness can be realized.

Also, the present invention has other feature that, the placement of the 1st, 2nd, and 3rd programs based on the creation method of Pallet Function can be controlled by ignoring the in terms of words inside each of the 1st, 2nd, and 3rd programs.

Here, too, the processing order for every word can be ignored, the intrinsically unnecessary logical combination, caused by bringing an order rule into logic, can be excluded. Thus, no matter who could it, the identical program excluding the arbitrariness can be realized.

The present invention has the other feature that in the boundary of the 1st, 2nd, and 3rd programs based on the creation method of Pallet Function and the existing software, the parameter is communicable via a separate and original field, other than that corresponding to words of the 1st, 2nd, and 3rd programs.

The original field on which to communicate parameter can be realized by work file (WFL), for example. A field corresponding to this work file exists separately from the fields corresponding to words of Homogeneity Vector, Duplication Vector and Action Vector, therefore, adaptability to a change of program et al becomes high.

Further, the present invention has the other feature that the area for every word based on the creation method of Pallet Function is a global area (commonly sharing the Pallet).

An area for every word in Pallet Function is a global area, therefore, it is not necessary to trace the strata of areas even on an occasion like a modification of system. Thus, a great efficiency can be brought about in debugging et al.

Also, the present invention has the other feature that a creation method of Pallet Function operating, in order, a 1st Pallet (WO4), a 2nd Pallet (WO2) and a the 1st program being for inducing word's semantic quality for every word in software to be produced, the 2nd program being for combining the semantic quality of the word between domains, the 3rd program being of executing various actions corresponding to the software, wherein the 1st Pallet (WO4) is for specific editing of the semantic quality of an object word; the 2nd Pallet (WO2) is for receiving instructions based on human recognition for an object word; the 3rd Pallet (WO3) is for establishing semantic quality of the word.

The meaning of 'semantic editing' is a behavior of contributing to human's behavior of assigning meaning by adding necessary attachment to data, which includes, for example, to provide a comma (,) every three columns to numbers et al. The meaning of 'instructions based on human recognition' is the direction to establish semantic quality , which is entered by a human via keyboard, mouse, voice inputting device, etc. For example, it corresponds to information caused by depressing a button 'Quit'.

The Pallet Chain Function is created in this manner. So, it can avoid the entry of arbitrariness when it is created.

Further, the present invention has the other feature that upon the movement of the 1st Pallet (WO4), the 2nd Pallet (WO2) and the 3rd Pallet (WO3) based on the creation method of Pallet Function, the moving operation is made by autonomously controlling programs so as to satisfy a synchronization structure.

The meaning of 'to satisfy a synchronization structure' is to operate so as to autonomously match the consistency to a rule of purpose between object programs or events, mutually, and it corresponds, for example, when semantic quality is fixed of every word, to maintaining the semantic quality through all WO2, WO3 and WO4 Pallets.

Like this, in the creation of the Pallet Chain Function, a synchronization structure is maintained among WO2, WO3 and WO4. So, even if there needs change data, it is not necessary to change inside of the logical structure, which brings about the effect of eliminating the arbitrariness from a program.

Further, the present invention has the other feature that, when software to be produced is developed onto Pallets being three domains, in order to combine word's semantic quality between Pallets for every word in the software, the 1st Pallet's semantic quality of an object word is duplicated to the 2nd Pallet corresponding to the word.

That is, the Duplication Vector does this duplication of semantic quality between Pallets only as for the mutual self words, so a synchronization structure between Pallets can be achieved.

Further, the present invention has the other feature that, when software to be produced is developed onto Pallets being three domains, semantic quality is induced for every word in the software.

That is, the development of WO2, WO3 and WO4 onto each Pallet has a role only to induce semantic quality for every word, thereby eliminating a room of the penetration of the other functions. Therefore, the arbitrariness can be excluded from a program structure , while enabling the determination of a primary program.

Also, the present invention has the other feature that in the creation of Homogeneity Vector, the movement of a program of an object word is autonomous, not necessitating a process order (interdependency) between words.

That is, the movement of program for every word is autonomous, and no check on the state of the other words is necessary at all in advance of semantic quality establishment, and only when semantic quality of self word has not been established, the determination of semantic quality is implemented. Thus, there is no rule of process order between words. For this, the determination of semantic quality is realized either by substitution or by calculation, so as far as a logic structure is concerned, a tree structure based on alternative selection disappears. For this, actual program preparation can be finished by the substitution of identifiers, and the judgment on its validation can be fulfilled only by checking on the presence of semantic quality , that is, the presence of data code corresponding to self word. Because of this, a great efficiency can be realized.

The present invention has the other feature that, when software to be produced is developed onto Pallets being three domains, appropriate kinds of actions corresponding to the software are executed for every word in the software.

The meaning of appropriate kinds of actions is inevitably limited to three kinds of set, i.e., collection, direction and route. By executing these action commands, an in coordination that might happen according Scenario Function's embodiment onto a computer can be adjusted, and a desired program can be realized.

Also, the present invention has the other feature that in managing a 4th program to appropriately select and place, onto Pallets being three domains, for every word in a software to be produced, following programs: a 1st program to establish semantic quality to the word; a 2nd program to combine the word's semantic quality between Pallets; and a 3rd program to execute various actions corresponding to the software, a managing assisting apparatus on this manages the number of programs as well as situation.

An idea of this invention is to remove the arbitrariness from the occasion of software management, and this idea itself can be mechanized at ease. By mechanizing it, more efficient management of primary software without the arbitrariness can be promoted. Thus, software management based on this invention can be promoted practically further more. That is, since in managing programs all that has to do is to manage toe object program which was uniquely determined, a software management based on this invention can be practically promoted further.

Further, the present invention has the other feature in maintaining a 4th program to appropriating select and place, onto Pallets being three domains, for every word in a software to be produced, following programs: a 1st program to induce semantic quality to the word a 2nd program to combine word's semantic quality between Pallets; and a 3rd program to execute various actions corresponding to the software, a maintenance assisting apparatus on this invention uniquely identifies related software by designating addition or modification of items corresponding to the software.

An idea of this invention is to remove the arbitrariness from the occasion of software maintenance, and this idea itself can be mechanized at ease. By mechanizing it, more efficient maintenance of primary software without the arbitrariness can be promoted. Thus, software maintenance based on this invention can be promoted practically further more.

Also, the present invention has the other feature that in managing a 4th program to appropriating select and place, onto Pallets being three domains, for every word in a software to be produced, following programs: a 1st program to establish semantic quality to the word a 2nd program to combine word's semantic quality between Pallets; and a 3rd program to execute various actions corresponding to the software, a management assisting apparatus this invention manages the number of programs as well as situation. An idea of this invention is to remove the arbitrariness from the occasion of software management, and this idea itself can be mechanized at ease. By mechanizing it, more efficient management of primary software without the arbitrariness can be promoted. Thus, software management based on this invention can be promoted practically further more. That is since in managing programs all that has to do is to manage the object program which was uniquely determined, a software is installed on a computer with its adjustment maximized (tuning), the software being produced by appropriately selecting and plotting the following: a 1st program to establish semantic quality to the word a 2nd program to combine word's semantic quality between Pallets; and a 3rd program to execute various actions corresponding to the software.

On implementing as idea of this invention, the idea of maximum adjustment of a program can be mechanized at ease. By mechanizing it, further dieting of software which is unique and has no arbitrariness inside can be efficiently promoted.

The present invention has the other feature that the maximum adjustment relates to its coordination with a memory corresponding to a machine.

By actualizing maximum adjustment for a coordination with the memory, the present invention can be realized under condition of less memory space.

The present invention has the other feature that the maximum adjustment relates to a coordination of a process time in a machine. By actualizing maximum adjustment for a process time, the present invention can be realized under an environment with a fewer time resource,

Also, the present invention has the other feature that in producing a software, the software being produced by appropriately selecting and plotting the following : a 1st program to establish semantic quality to the word a 2nd program to combine word's semantic quality between Pallets; and a 3rd program to execute various actions corresponding to the software, definition on a structure of Definitive the word belongs to, a process route of the software, and a self creation requirement for the word is done on word table corresponding to the word.

The determination of a structure of the Definitive to which words belong the process route of the software, and the Self-creation requirement of each of the words is implemented in one meaning in accordance with a theory of this invention, so a room for an entry of the traditional SE's arbitrariness can be eliminated.

Also, the present invention has the other feature that in a software development method, the determination of a structure of Definitive to which words belong, process route of t6he software, and the Self-creation requirement of each of the words can be implemented by a parallel work method in that the words are independent from each other.

The determination of the process route and the Self creation requirement of each of the words is implemented independently because each is autonomous, therefore, it can avoid changing many locations as traditional methods, which is affected by a change of a certain location in a program. In addition, as they are mutually independent, a parallel work method can be easily realized. For this, by the implementation of this invention, more efficiency can be realized.

The present invention has the other feature that in a software development method, the determination of a structure of Definitive to which words belong, process route of t6he software, and the Self-creation requirement of each of the words can reduce development steps in that the determination can be accomplished only by being applied to a prescribed structure, thus not requiring mental ability and design.

That is, the determination of requirement of word's Self creation can be done only by being applied to a prescribed structure accorded in the theory of this invention. Therefore, the operations to date such as mental activity or design have been made unnecessary, thereby cutting a large number of development work steps.

Also, the present invention has the other feature that in software maintenance, identifiers of Definitive to which words of the software belong to and of the words are determined before these identifiers are substituted to Scenario Function which is a universal structure regulating software so that aimed software is determined primarily.

That is, in maintaining a software, major maintenance operations are completed only by the exact algebraic solution procedure, such as the determination of prescribed identifiers and the substitution of the identifiers into Scenario Function. Therefore, a major revolution is brought into the software maintenance work itself.

Further, the present invention has the other feature that in existing software, by extracting identifiers of Definitive to which words of the software belong to and elements determining processing routes as well as by determining a Homogeneity Map representing such process, a prescribed software can be determined primarily by substituting those into Scenario Function which is a universal structure regulating software.

That is, for transplanting of a software, too, major operations are completed only by the exact algebraic solution procedure, such as the determination of prescribed identifiers and the substitution of the identifiers into Scenario Function. Therefore, a software translating work itself is simplified surprisingly.

Further, the present invention has the other feature that in a software transplanting method, that the existing software is a source code produced by the traditional program creation method.

The simplification of software transplanting can take as an object a source code, which was produced by the traditional program creation method.

Also, the present invention has the other feature that elements extracted from existing software that determine process routes can be mapped on Homogeneity Map which can be obtained by placing multiple domains containing criterion program that possess common structure for every word of the software.

That is, the creation of Homogeneity map can be completed only by mapping prescribed elements in accordance with the processing route, so both the skilled SEs required for making traditional requirement definition and the presence of its design work itself are made unnecessary.

Further, the present invention has the other feature that in the software transplanting method, by determining definitives to which words extracted from existing software belong, data structure of the existing software is replaced into the data structure suitable to the criterion program which possesses a common structure for every word in the software.

That is, in software transplant, only by going through a mechanical work, which replaces data structure of the existing software into the data structure suitable to the criterion program which possesses a common structure for every word of the software, the transplanting can be realized. This means, after all, that, even a high-level work of software transplant can be performed by unskilled staff, which consequently provides astonishing technology to production, maintenance and transplant of software.

Also, the present invention has the other feather that, in the software transplanting method, by determining definitives to which words extracted from existing software belong, date values of the existing software are replaced into the data values on a data structure suitable to criterion program which possesses a common structure for every word in the software.

That is, in software transplant, the same as above, only by going through a mechanical work, which replaces data values of the existing software into the data values data of the criterion program which possesses a common structure for every word in the software, the transplanting can be realized. This means that, after all, even a high-level work of software migration, can be performed by unskilled staff, which provides astonishing technology to production, maintenance and transplanting of software.

Further, the present invention has the other feature that in the software transplanting method, it takes a premise of converting a multiple-layer program of existing software into a single-layer program.

That is, a logical structure made complex and difficult to debug by making it into multiple layers can be made simplified, and software with strong adaptability to changes and to modifications can be realized.

Also, the present invention has the other feature that in the software transplanting method, the transplanting can be realized by running in parallel the existing software and the software realized after transplant.

That is, in the software transplanting method, a complete mechanization can be realized because it is done only by replacing the existing one into the prescribed structure of this invention. This enables a progress operation to shift to a new system from a certain instant, while running an existing system until just before the transplanting.

Further, the present invention has the other feature that in the software transplanting method, computers on which software before and after the transplanting operates different.

That is, the software transplanting method of this invention is realized only by having the structure modified into the one prescribed by this invention, thus, even if computers on which software to operate are different, the effect can be realized without hindrance.

Also, the present invention has the other feature that a software development process is managed by using an algorithm which creates the software to be produced by appropriately selecting and placing, onto pallets being three domains, for every word in the software to be produced, the following:

That is, in the software development process management, too, only the 1st, the 2nd and the 3rd programs based on the theory need be created in accordance with uniform algorithm. Thus from the software development process, the arbitrariness can be excluded. In other words, the traditional logic itself has been eliminated.

Further, the present invention has the other feature that, by combining the algorithm and the application of Scenario Function, which is a universal structure regulating all software, a univocal development method can be realized for a software development management method.

That is, the Scenario Function, as long as it is a function, is a universal structure, so the software can be determined like solving arithmetic expression only by substituting identifiers into its independent variable part of the Scenario Function. In other words, software can be obtained univocally as a solution.

Also, the present invention has the other feature that in the software development management method, by applying the algorithm and the Scenario Function, which is a universal structure regulating software, it can be made structurally universal.

That is, by applying the algorithm and the Scenario Function, a software development management method is also structurally made universal structurally, so that method can be made extraordinarily simple. This means that the same is also true for a software operation management method.

Further, the present invention has the other feature that, it is featured that, by using the algorithm, which creates a software to be produced by appropriately selecting and placing, onto a pallets being three domains, for every word in the software to be produced, the following: a required software can be univocally obtained also for specification modification corresponding to the software.

That is, for the specification modification of the software, too, only by determining the 1st to 3rd programs, regardless of program's functionas, in accordance with the Scenario Function possessing a universal structure, a prescribed software can be obtained univocally. Thus, the adaptability to specification modification and design change of the software becomes significantly superior.

Also, the present invention has the other feature that an algorithm, is realized where of the $1^{st}$ to the $3^{rd}$ programs realized as LSI, for example.

An algorithm to determine software, advocated by this invention, is what never permits a room for an entry of the arbitrariness. Therefore, its realization is not limited to computer software but extendable to LSI, for example. For example, by separately preparing LSIs to which the logical structures of Tense Control Vectors on each pallet and of Pallet Function, a processing device to determine semantic quality can be realized, while maintaining the synchronous structure. By this characteristics, the possibility of the materialization of processing device of whose function is to determine semantic quality becomes extensive.

Further, the present invention has the other feature that on a parallel computer, Pallet Function and Pallet Chain Function are realized as LSI made into logical atoms, the Pallet Function placing the 1st to 3rd programs onto the pallet by appropriately selecting them, the Pallet Chain Function operating the first pallet (WO4), the second pallet (WO2) and the third pallet (WO3), on which these 1st to 3rd programs are appropriately placed.

That is, an LSI idea is applicable not only to the Pallet but also to the Pallet Chain Function, and if an LSI with Pallet Chain Function's functionality is prepared, through inducing semantic quality while maintaining a synchronous structure, a structure to determine software can be realized as an LSI. By this, the possibility of materializing process devices with the functionality of software production becomes further extensive.

Also, the present invention has the other feature that upon the solution to problems of using software, the requirement as many as the number of Unit-Links of words of the software is presented as information to solve the problems.

That is, an idea of determining semantic quality in this invention for every word accompanying the semantic quality can exactly be applied to the solution itself of problems of using software. By this, a solution to a problem can be performed univocally and efficiently.

Further, the present invention has the other feature that the criterion program contains an order rule into programs for every word.

That is, in the criterion program, an order rule is contained in programs of every word. This means that an order rule is brought about naturally by the movement of a computer. So, the logic for considering the order of every word can be excluded from software.

Also, the present invention has the other feature that in a method for determining a file comprising a step to extract both a medium actualized from language materialized by a software requester as a development requirement and a word, which is a unit of establishing semantic quality existing on the medium; a step to define respective identifiers to the extracted medium and to the word; and a step, by attaching regularly determined identifiers to the identifiers of the defined medium and the word, to induce and to define a file corresponding to the medium and a data area related to the word on the file as files needed to realize the software, the software is univocally obtained by substituting the defined identifiers of the file and the words on the file into independent variable parts of the Scenario Function which functionally expresses a mechanism to induce from a data code the one and only semantic quality assumed on the data code.

The 'regularly determined' means to accord in a certain rule, thereby enabling a method of avoiding the entry of the arbitrariness. For example, it is a rule which designates an identifier of File as "f".

That is, created, and even if only some screen and words on the screen have been apparent, at the stage of learning requirement from the development-requester when some software is to be realized, a file needed for the software to be realized can be drawn without leaving any room of the entry of the arbitrariness, as mentioned before, by defining the identifier for the screen and the identifier for the word, then i.e. the screen identifier ('A', for example), the word identifier ('i', for example), defining the identifier of the word -on the screen ('A_ i', for example), thereby defining the identifier ('Af_i' in the above example) which is unambiguously made by attaching a regularly determined identifier file ('f', for example) to the identifier ('A_i', in the above example).

In other words, the existence of file that was not always clear at the stage of learning development requirement can eventually be defined automatically by implementing the prescribed procedure (unrelated to the arbitrariness) accorded in the Scenario Function.

That is, for this reason, SE's file designing (based on his own capricious logic and experience) which has been the traditional cause of producing a black box can be eliminated form the software development process.

In addition, the present invention has the other feature that in a method of creating Homogeneity Map, which is a diagram visualizing Scenario Function that makes functional expression of the providence of existence, i.e., a mechanism to induce from a certain meaning a unique semantic quality which is an origin of forming the meaning via multiple domains, when independent variables of the Scenario Function are the screen, File or Printouts, as for media, and are words belonging to the screen, File or Printouts, as for the semantic quality obtaining media, the corresponding multiple domains comprise a 1$^{st}$ area (W04) to interface with human recognition as well as implement memorization which is a root of the human recognition; a 2$^{nd}$ area (W02) to accept the word's semantic quality; and a 3$^{rd}$ area (W03) to establish semantic quality of the accepted word significance, wherein the 3$^{rd}$ area (W03) is, when whether establishing method of the word's semantic quality is irreversible as the providence of existence say or reversible contrary to the providence of existence is clear, is separated as W02G pallet in the former case and as W04P pallet in the latter case.

Also, the present invention has the other feature that in the method of creating the Homogeneity Map, the W03 Homogeneity Vector specifies that the Vectors of data input words belonging to media (k) such as screen be mounted on W02G pallet as LG3(k, i); the Vector of input/output words corresponding to data output belonging to media (k) such as screen be mounted on W04P pallet, as Duplication Vector Tape Homogeneity Vector (LY3(k, i)); the Vectors of data output words be mounted on W04 pallet as LP3(k, i); and the Vector of boundary words located in the boundary of T0 and T1 be mounted on W04P pallet as R-type Duplication Vector(LR3(b, i), respectively.

That is, in the method of creating the Homogeneity Map, the determination of the source code corresponding to Tense Control Vector can be automated limitlessly by taking the premise that the W03 Homogeneity Vectors mounts:

> of data input words belonging to media (k) such as screen be mounted on W02G pallet as LG3(k, i);
> of data input/output Words corresponding to data output belonging to media (k) such as screen be mounted on W04P pallet as Duplication Vector type Homogeneity Vector (LY3(k, i)); of data output words be mounted on W04P pallet as LP3(k, i); and of Boundary words located in the boundary of T0 and T1

be mounted on W04P pallet as R-type Duplication Vector (LR3(b, i); of data output words be mounted on W04P pallet as LP3(k, i); and of Boundary words located in the boundary of T0 and T1 be mounted on W04P pallet as R-type Duplication Vector (LR3(b, i).

Also, the present invention has the other feature that it comprises the followings: a step for extracting words in natural language from a software development requirement possessed by clients; a step for defining definitive identifiers and word identifiers corresponding to the extracted words in accordance with Lyee methodology and for registering the defined identifiers to a tool related to the Lyee methodology, the Lyee methodology determining aimed software univocally by applying Scenario Function which functionally expresses a mechanism in which semantic quality established in the Consciousness is unambiguously handed over meaning-space in the depths of consciousness, through Definite meaning-space, Event meaning-space and Equivalence meaning-space; a step for automatically generating the software by use of the tool; a step for automatically generating the software by the tool, in case defining operational requirement is judged to be necessary as a result of the automatic generation, after requesting he client to define the operational requirement and reflecting the operational requirement presented by the client onto the tool; a step for delivering the generated software to the client.

By this invention, the following procedure may as well be observed when implementing software development:

(1) To learn development requirement from clients. To extract words in natural language from this development requirement.
(2) According to the Lyee methodology, to register the extracted words onto its tool, for example. In this process, to define definitive identifiers and word identifiers and register them into the tool.
(3) Here, by the tool, to automatically software. That is, to bury applicable identifiers to the undefined parts of templates (a series of codes in which only undefined parts are yet to be specified) of Tense Control Vectors, each Pallet Function, and Pallet Chain Function possessing a universal structure based on Lyee, and then to specify codes.
(4) In this instance, when it is judged necessary to define operational requirements (a data code generation calculating formula and justification conditions) as a result of such automatic generation, to obtain definitions of the operational requirements from the clients.

(5) To register work requirements presented by the clients onto the tool and do again to generate software automatically.

(6) To implement compiling, etc., when needed, and deliver the generated software to the client.

By these procedures, an aimed software can be obtained only by the extraction of words existing in the development request, the determination of identifiers of words, screens, etc. and the reflection of development requirement (as self-creation calculating formula and justification conditions formula), without requiring logical design in particular at the development side. Viewing it as a business method, not only the time and labor for previous discussions, verifications, debugs, etc., which have been taken for granted to date for both developing and development-requiring sides, can be eliminated but also an ideal of software development and maintenance only by the development-requiring side can be realized..

In addition, this invention has the other feature that, after grasping the providence of existence as a philosophical proposition which is lead to human recognition of semantic quality present in the Consciousness meaning-space in the depths of consciousness, it determines software as the one and only that is obtained by substituting applicable identifiers for the undefined part of the Scenario Function which is a universal model formed by combining such philosophical proposition and a set theory.

After all, this invention, by combining the set theory with a philosophical proposition of a providence of existence in which semantic quality in the Consciousness meaning-space of the depths of consciousness is to be recognized by humans, introduces Scenario Function given as a prescribed universal structure, and makes it possible that, by substituting applicable identifiers for the undefined parts of the Scenario Function, a desired software be determined as the one and only. Effects by this matter will become immeasurable as already mentioned. For example, evading from solid placement of maintenance staff, cutting debugging burden, curtailing of software development time and cost to a large extent, reducing development management system to an enormous degree, etc., effects of which are beyond imagination.

Also, this invention has the other feature that, by reconstructing a providence of existence in terms of set theory, the providence having it that semantic quality present in the Consciousness meaning-space of the depths of consciousness be led to human recognition, changing it into algorithm as a Scenario Function using a three-dimensional space model and substituting applicable identifiers for the undefined parts of the Scenario Function, a desired software can be determined as the one and only.

That is, this invention, by reconstructing a providence of existence in terms of set theory, the providence providing that semantic quality present in the Consciousness meaning-space of the depths of consciousness be led to human recognition, changing it into algorithm by using a three-dimensional space model, it introduces a Scenario Function given as a prescribed universal structure, and it enables to determine software as the one and only by substituting applicable identifiers for the undefined parts of the Scenario Function. Effects by this matter will become immeasurable beyond imagination, including emergence from solid placement of maintenance staff, cutting of debugging burden and labor, large cuts of time and cost of software development, large reduction of development management structure, etc.

Also, this invention has the other feature that, after grasping a structure of consciousness present in the depths of consciousness as a philosophical proposition and by changing it into a functional expression by combining the set theory with such philosophical proposition and by using a consciousness model purposing to obtain a solution to such function, it obtains a true solution to the philosophical proposition.

In addition, this invention has the other feature that, after grasping a structure of consciousness present in the depths of consciousness as a philosophical proposition, and by making the structure into an algorithm by using a three-dimensional space model against the universal consciousness model formed by combining the set theory with such philosophical proposition, it obtains a true solution to the philosophical proposition by using such algorithm.

Also, this invention has the other feature that, after grasping a structure of consciousness present in the depths of consciousness as a philosophical proposition, by making the structure into an algorithm by using a three-dimensional space model against the universal consciousness model formed by combining the set theory with such philosophical proposition, making this algorithm into Scenario Function including undefined parts, and by substituting applicable identifiers into the undefined parts of the Scenario Function, it determines a desired software as the one and only.

In addition, this invention has the other feature that it relates to a program possessing. : A first criterion program (Tense Control Vector) to possess a prescribed first universal structure to realize semantic quality, regardless of software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media; A second criterion program (Pallet Function) to possess a prescribed second universal structure to develop the first criterion program, regardless of software's functionality, into multiple domains, the second universal structure containing the first and the second undefined parts; and A third criterion program (Pallet Chain Function) to possess a prescribed third universal structure to chain the first and the second criterion programs so that the semantic quality be synchronously established for every unit of the semantic quality and for every said medium, regardless of software's functionality, the third universal structure comprising the first and the second undefined parts, wherein the software is unambiguously determined by substituting identifiers of the media and identifiers of the semantic quality obtaining subjects belonging to the media, which were derived from the development requirement of the software, into the first and the second undefined part. After all, this invention can originally be realized as a program product that enables the first to the third criterion programs to be partial programs. Also, this invention has the other feature that it relates to a transmission wave to make a computer realized function to be specified by possessing: A first criterion program (Tense Control Vector) to possess a prescribed first universal structure to realize semantic quality, regardless of software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media; A second criterion program (Pallet Function) to possess a prescribed second universal structure to develop the first criterion program, regardless of software's functionality, into multiple domains, the second universal structure containing the first and the second undefined parts; and A third criterion program (Pallet Chain Function) to possess a prescribed third universal structure to chain the first and the second criterion programs so that the semantic quality be synchronously established for every unit of the semantic quality and for every said medium, regardless of software's functionality, the third universal structure comprising the first and the second undefined parts, wherein a software is unambiguously determined by substituting identifiers both of media derived from development requirement of a program to be realized and of the subject obtaining the semantic quality belonging to the media into the first and the second undefined parts, respectively. In addition, this invention has the other feature that it relates to a paradigm-based program that realizes

The following program as a program accorded in the paradigm that gives a predetermined universal structure : A first criterion program (Tense Control Vector) to possess a prescribed first universal structure to realize semantic quality, regardless of software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media; A second criterion program (Pallet Function) to possess a prescribed second universal structure to develop the first criterion program, regardless of software's functionality, into multiple domains, the second universal structure containing the first and the second undefined parts; and A third criterion program (Pallet Chain Function) to possess a prescribed third universal structure to chain the first and the second criterion programs so that the semantic quality be synchronously established for every unit of the semantic quality and for every said medium, regardless of software's functionality, the third universal structure comprising the first and the second undefined parts, wherein a software is unambiguously determined by substituting identifiers both of media derived from development requirement of a program to be realized and of the subject obtaining the semantic quality belonging to the media into the first and the second undefined parts, respectively. After all, this invention can originally be realized as a paradigm-based program that realizes the first to the third criterion programs and partial programs as a program accorded in the paradigm which provides the prescribed universal structure.

4.2 Disclosure of the background principle to justify this invention

4.2.1 The starting point of conception of this invention

This invention (called "LYEE" hereinafter) adopts a method fundamentally different from traditional invention methods. That is, it may safely be said that a traditional invention was a utilizing invention or an improving invention, which has been implemented to accumulate techniques, so to speak, by adding improvements in order to complement defects of traditional technology and established technology or by using it.

To the contrary, LYEE takes a standpoint that it is necessary to see through the cause of limits brought about by the traditional technology so as to truly solve the problem referred to in the previous columns, and it penetrates into the essence of a software concept that has been elucidated as a result of having deepened thinking.

Fig. 1 is a conceptual block diagram which explains a conceptual method of this invention.

As shown by this diagram, for a program expressed by requirements made up of natural language and a series of codes, which has materialized a concept of software 101 a phenomenal existence of, a series of words 101b composing requirements and a phenomenal existence of a program 101a composed of by codes corresponding to the series of words are grasped not as a mutual casual relation 102 like in a traditional method, but they are grasped as a philosophical proposition 101bb, 101aa. That is, by regulating a general form (that is, in the form of a functional equation) that grasps software 101 as a true (103) solution to a proposition, and for obtaining a concept of software, that is, a correct solution to a requirement and a program big a right-solution by solving such equation, a method adopted establishment of such function and mechanization thereof. That is, LYEE is not an improvement of a certain technology improvement, but it elucidates a root forming problems and subjects to be cleared, and so as to solve them it refreshes an outlook on the world. It supplies a means to solve problems based on the new natural rule of the refreshed outlook on the world.

Fig. 2 is a conceptual block diagram which explains roles of the concept of software. As shown in this diagram, LYEE adopts the definition that the software 201 is a general concept covering not only the program 201a which a human (203) inscribed (201aa) with codes by using programming language readable inside computer 202, in order to execute movements 204 desired by a human 203 as a direction 201aaa to the computer 202 but also the requirement definition documents 201b, in which a human 203 stated (201bb) conditions in words of natural language for enabling the codes 201a to perform due roles. Herein, the program 201a and the requirement definition 201b are called a phenomenal existence in the sense that they have come to exist as a result of the embodiment performed by a human 203's actions such as inscription 201aa and statement 201bb.

Based on this definition, the requirement definition 201b stated in a series of words is a meaning set body of the statement 201bb as a group of directions composed of natural langurage for a human 203 who determines series of codes 201a, and the series of codes may also as well be a meaning set body of the inscription 201aa as a group of directions in programming language a human give in order for a computer 202 to operate as prescribed.

Fig. 3 is a conceptual block diagram which explains a concept of a meaning. As shown by this diagram, when a logic to make a computer move as prescribed was expressed as a series of codes 201aa as a group of direcions using programming language via requirement definition 201bb as a group of directions composed of natural language, each of the phenomenal existence 301 which is a group of directions actualized by a human (201bb and 201aa. These are a phenomenon recognized by visual, auditory, or tactual sensation. Therefore, they are called "visible existence", while the unrecognizable being called "invisible existence".) is established not as a causal relation, but as being whose origin causing individual phenomenal existence are materialized independently from each other, and a meaning is thought of as what has passed invisible logic that is interpreted as an intention to embody a phenomenal existence from the origin of the existence.

In other words, an actualized directions 301 and an intention (thinking logic 303), which makes the condition for rendering the directions 301 true as a proposition be latent in inside, i.e. in the so-called depths of consciousness can be defined as concepts forming a complementary relation 305 to each other complementary viewed from the set theory.

That is, according to the set theory, there is an axiom that the establishment of existence called a 'subset' takes a premise of the existence of a complementary set which is a set of all subsets (including an 'empty set') excluding the subset. Therefore, an actualized existence cannot materialize as existence by itself, but has two-sidedness in that it takes a premise of existence of all other subsets (that is, a 'complementary set', all containing not only a part of other actualized existence but also all non-actualized existence) except itself. And, the 'complementary set' of all subsets excluding existence of a certain subset is regarded as an intention (thinking logic 303) ,which makes establishing condition be latent inside the so-called depths of consciousness.

Then, with such software, it is known that both of the existence of requirement definition 201b which was actualized in natural-language words by a human who determines the requirement and the existence of program 201a which was actualized in a series of codes based on the requirement definition by a human who determines the program are existing as a meaning having the above-mentioned two-sidedness.

However, viewed from the side of a computer to operate based on such software, the software is no more than a simple enumerated codes, and it cannot be said existing as a meaning of the concept containing the above-mentioned latent and invisible logic 303. This is because, viewed from the Neumann-type computer's principle, a CPU simply does movements such as data transmission, copy, calculation and comparison between particular registers and particular memory addresses just as directed by codes and there is no room thereabouts for a computer 202 to interpret invisible logic 303 from the actualized codes.

A conclusion which is inevitably introduced from the above observation is that software exists as a concept of meaning, that the determination of software existing as a meaning takes invisible logic as a background, and that a computer will never autonomously complement invisible logic.

A meaning (intention/will) as a latent logic 303 is an invisible existence (This invisible existence is a complementary set of visible existence, and in this complementary set there is an 'empty set'. The contour of the 'empty set' is an 'uncertain' existence which cannot be grasped, therefore the complementary set containing the 'empty set' is also uncertain by itself as a whole and becomes invisible existence.). Therefore, it must inevitably accompany a behavior of interpretation by guessing.

The subject of the behavior of this 'interpretation by guessing' is a human and to its effect self-will is inevitably involved in such behavior. Due to the inevitability of the entry of self-will, the arbitratiness cannot be eliminated from the behavior of software determination, and to the effect of the inability to eliminate the arbitrariness there is an inevitable indefinite part (that is, a black box-like part) of the grounds of argument led to logical structure determination both of the requirement definition 201b composed of software words and of the program 201a composed of codes. And, leaving this black box-like part not eliminated is considered to be fundamental causes of problems incurred by the traditional software production.

For this reason, in a case where multiple people do the determination of software for a subject of realizing a logic to perform a certain function as a series o f codes, the interpretation of the requirement item (201bb) implemented necessarily during the course of determination and the understanding of the explanation content on a product (201aa) being a determined codes are inevitably implemented against the latent invisible logic 303 part, that is a black box-like part. It is this black box that produces differences in logical structures, from person to person, which realizes the requirement definition 201b composed of words embodied as a result of the interpretation and the program 201a composed of codes.

Therefore, documentation being an action to achieve the unified understanding for proceeding a team work in the field of software production and examination of the document 201b so as to read intention of software creators and tracing review of codes in the field of software maintenance are necessitated to spend enormous time and labor on. The result is a reality extraordinarily impairing productivity, quality and development period of software production and maintenance.

In LYEE, all interpretation of meaning is removed from any software, against the invisible existence 303 controlled by personal ability which forms grounds of extraordinarily impairing productivity, quality and development period in the traditional methods.

Fig. 4 is a conceptual block diagram for explaining a method to determine software not requiring interpretation of meaning achieved by LYEE.

As shown by this diagram, the following steps are taken: To correspond (402), as 1:1, identifier 401 for identifying the program 201a composed of codes as the program, with individual words 400 which compose language uttered as a development requirement; to substitute it into the first program template 403 possessing a principle of structure of this invention; to determine the first program 405 (also called 'Homogeneity Vector'), which is consists of program identifier 405a corresponding to the identifier 401, data field 405b's address, and process logic 405c and 405d composed of codes for generating data code, into program identifier 405a corresponding to the identifier 401, data field 405b's address, and the data field 405b; at the same time, to substitute the same identifier 401 f as in the first program 405 or the second program template 407 possessing a principle of structure of LYEE for setting a state of materializing the first program 405's purpose into the data field 405b of the address indicated by identifier 401 so as to determine the second program 409 (also called 'Duplication Vector') made up of codes composed of the program identifier 409a corresponding to the identifier 401 and the process logic 409b. These are almost all that are codes to be determined in LYEE.

Herein, identifier 401 is an identifier to identify data field 405b which is set on media such as Screen, Printouts or File, and it is generally called 'data address'.

After all, all that has to be done is to substitute the identifier 401 identifying data field 405 set on Screen, Printout or File into program templates 403 and 407 which possess the principle structure, and the identifier 401 is nothing but individual words composing the uttered language as development requirement, so it is synonymous with a system where a solution is obtained by substituting concrete items into variables. As a result of this, the influence of arbitrariness can be excluded because interpretation of meaning is not required at all during the process from the development requirement to the determination of final-product of codes 405 and 409, the initial stage of software development. However, the freedom of expression is allowed by the prescribed operational expression, for creating data code into data field 405b indicated by the identifier by use of a predetermined calculative formula in the principle-structure process logic 405c and 405d which formulates the first program 405.

A series of codes 405 and 409 corresponding to identifier 401 given 1:1 to individual words contained in the development requirement are made into object file (assembled or compiled), then by operating this object-file codes in accordance with the synchronous structure (detailed later), software satisfying the development requirement can be realized as due. The 'synchronous structure' is a principle logical structure, unique to this invention, by which programs for every identifier 401 in the first program 405 group generate data code simply by data link (that is, autonomously) to keep consistency mutually so that they satisfy the intention, the invisible existence which made words uttered as a development requirement without the medium of language.

The principle structures concerned with the above first program 405 group and the second program 409 group are identical even if requirement, programming language, kinds of computer, or OS are varied. That is, for software to realize any kind of functionality, the structure possesses the principle structure corresponding to the above first program group 405 and the second program 409 group, thereby not involving any other logical programs which afford the entry of SE's capricious thinking. Because of this, from the software production field are completely eliminated the grasping of requirement uttered by the planner, the construction of logical architecture for the software, and traditional try-and-error process which accompanied such work as the determination of the codes, in he software production cases. As a result, the arbitrariness can be excluded. Consequently, all black box-like parts are eliminated from software, and problems attached to traditional software, mentioned above, can be all wiped out.

4.2.2 'Structural principle of a meaning' that is an essence of software

The essence of software is, as explained by Fig. 2, is a general concept of the program 201a composed of series of codes and the requirement definition 201b composed of a series of words regulating conditions for necessitating the codes to be a due functionality.

In other words, software is an existence of a meaning having a complementary set relation 305 between the product 301 which became a visible existence as an embodied language as a result of a meaning-giving behavior a as explained by Fig. 3 nd the invisible logic 303 invisible which goes from the origin of a meaning-giving behavior for materializing the product to the embodiment of the product.

However, a computer is only a machine that faithfully executes certain signals as instructed, and essentially it never happens that a computer interprets a meaning of invisible logic.

This means that, without elucidating 'a scheme of thinking of the intention 303 latent internally that is generally called the depths of consciousness of a person giving a meaning to certain code, that is, invisible logic 303's structure', the series of codes cannot be determined primarily from words uttered as a requirement. That is, unless otherwise, it cannot be said that the phenomenal existence 201b of software requirement and the phenomenal existence 201a of program could be grasped as a philosophical proposition to obtain a true solution.

Though predicative logic has been established in a explanatory method by using a mathematical equal symbol for the relation of words, a scheme of a meaning (intention) of word a human wants to communicate, and a scheme of human recognition of a meaning (intention) have traditionally been regarded as a subject of philosophy, psychology and linguistics. It has never been treated as such subject belonging to the natural science domain as can be explained in terms of its casual relation (a relationship between equation's right-side function and equation's left-side subordinate variables) by use of a mathematical equal symbol, including equation, function, etc. That is, a scheme of human recognition of a meaning belonged to a domain the traditional predicative logic could not reach. But, in the elucidation of a meaning, if it is regarded as not belonging to the natural science category because a meaning is not an mass existence and therefore cannot be regulated objectively by physical properties, then we must even negate a concept of time from natural sciences. This is because a concept of time which is a base concept of natural sciences is not a mass existence. Reversibly, it is thought that we cannot conclude in short-cut that we may as well exclude the concept of a meaning that is not a mass existence from natural sciences' subjects.

In order to correctly grasp a true state of existence, regardless of the subject being a mass existence or not, we need a thinking method of grasping it by speculating a complementary set relationship between the actualized phenomenal existence and the invisible existence (meaning) which is believed to be inevitably latent in the actualized phenomenal existence (Wittgenstein: Logical atomism). In this connection, philosopher Spinoza made the following definition of a concept of existence in his work "The Ethics'.

The Ethics by Spinoza:

> I.By THAT which is SELF-CAUSED, I mean that of which the essence involves existence, or that of which the nature is only conceivable as existent
>
> II.A thing is called FINITE AFTER ITS <u>KIND,</u> when it can be limited by another thing of the same nature; for instance, a body is called finite because we always conceive another greater body. So, also, a thought is limited by thought, nor a thought by body.
>
> III.By <u>SUNSTANCE,</u> I mean that which is in itself, and is conceived through itself; in other words, that of which a conception can be formed independently of any other conception.
>
> IV.By <u>ATTRIBUTE,</u> I mean that which the intellect perceives as constituting the essence of substance.
>
> V.By <u>MODE</u>, I mean the modifications of substance, or that which exists in, and is conceived though, something other than itself.

Also, in addition, Leipniz implies about the materialization of the above relation by means of a concept called 'possible union' and 'pre-established harmony'.

Philosophy does not go beyond the solid conceptual definition of existence as above, whereas, LYEE grasps a scheme of the formation of 'being a meaning' which is invisible existence believed to be latent in actualized phenomenal existence by means of structural semantics based on the set theory viewed from the understanding of physics. As a result of this, this invention builds up a world without inconsistency, thereby theoretically avoiding Russell's 'irrationality' which is an inconsistency contained in the set theory as for the infinite domain.

As a result, conclusively speaking, the concept of "existence' which was defined and made into axiom and into theorem by Spinoza was defined and made into axiom and into theorem by LYEE on the basis of axiomatic set theory. As a result, it is possible to establish the following corresponding relations.

Substance: Equivalent logical atom of Consciousness Unit-Link.
Attribute: Divergent dense set of consciousness Unit-Link.
Mode: Coupling of Cognitive Unit-Link

The following are discussed later, including Consciousness Unit-Link (a metonymic meaning), Cognitive Unit-Link (a metaphoric meaning), Equivalent Logical Atom, divergent dense set, Coupling.

The requirement Document 201b and a series of codes 201a, which are described by development and maintenance engineers after interpreting, inclusive of guessing, the requirement items 400 the software planner expressed with language or documents, are visible existence, and they are phenomenal existence (normally called 'things') in the sense that they were embodied and actualized from a meaning (intention), which is an invisible existence 303. Further observation is made on this point.

Fig. 5 is a conceptual block diagram to explain a concept of existence event. As shown by this diagram, a reason why existence event can be existence phenomenon is as follows: It exists with a meaning by itself, that is, it has a meaning because it was true as a proposition, or the existence phenomenon 501 has been actualized as another existence phenomenon, it has a different meanings that 501 is a symbol recognized as 'triangle' and that 503 is a 'cylindrical' composed of a substance with a mass. Here, the existence of 501a has been considered as a philosophical concept which is "a minimum unit SELF-CAUSED that is an ultimate indivisible metaphysically possessing a fundamental nature for forming the univocal meaning latent in the existence phenomenon (for example, to be recognized that 501 is 'triangle' and that 503 is 'cylindrical'.), which is an origin enabling existence event to be existence event. (Herein after, it is called semantic quality as named by this invention.) To be noted, a concept of this semantic quality is not 'infinite' but finite by taking a premise that it is an ultimate indivisible minimum unit.

Here, an observation is made from the standpoint of set theory concerning the grounds of argument of hypothesizing an ultimate element 501a called semantic quality. As already mentioned, a 'set' is one whole U, and 'm' which composes the whole set (which is called an 'element' of the whole set U) can be defined and discriminated from each other, and it is an element of our intuition or speculation (that is, giving a meaning) as defined by Kantor's 'transfinite set theory'. Therefore, it is considered quite natural to speculate that 'a nature to possess a meaning', that is, 'semantic quality' comes down to the whole U in which elements of a set gathered in light of the definition of the 'transfinite set theory'.

As aforementioned, philosopher Spinoza defined such element as follows in his work:

The Ethics by Spinoza:

I. By THAT which is SELF-CAUSED, I mean that of which the essence involves existence, or that of which the nature is only conceivable as existence.

Also, philosopher Wittgenstein named it 'simple symbol' or 'logical atom'. And, it leads to that the gathering of such element can be perceived by intuition or speculated, that is, recognized. After all, it leads to that it nightly means that it is a phenomenal existence possessing a meaning. Accordingly, the rule of the set theory can be regarded as the exact cognitive theory of existence by itself.

A 'meaning' cited in the "structural principle of a meaning' stands on a thinking that this ultimate element 501a behaves with rules, and in conclusion it becomes a 'mode' as defined by Spinoza, and it gushes out in human mind and materializes as a result of human's cognition. All substances, for example, concerning phenomenal existence 503, there are a world 505 of the substance composed of an elementary particle 505a which is an ultimate root of substances regulated by physics, and as well as a world 507 of the non-substance composed of 'attribute' which is called an ultimate-existence 'semantic quality' of a meaning accompanying the elementary particle 505a, and it is thought there must be a common structural principle on the level of the ultimate element 501a because either of them is an object to be recognized, that is, it falls onto a concept called 'existence phenomenon', even if there are differences between them in that the former is concrete and the latter is non-concrete.

An outlook on the world explainable as a rule of concrete existence by quantum physics which is positioned at the ultimate level is an outlook taking a premise of a elementary particle theory in order to explain a real state of quantum level that cannot be explained by Newton dynamics. Details are referred by, for example, Schrodinger's wave equation, or Heisenberg's uncertainty principle. However, the wave function to accurately explain this world of quantum physics is still in a state of mix of confusion with various opinions of a school of Copenhagen, London, etc. how to solve a difficult problem concerned with the handing of an 'observation, (that is, it is thought synonymous with 'giving a meaning' which is a base theme of this invention). Details of this concern can be found in 'Spiritual Physics' authored by Teruaki Nakagomi, 'The Century of Physics' by Fumitaka Sato, et al.

These opinions, after all, take a standpoint that a physical fundamental, i.e., an elementary particle, is positioned as an ultimate element of all of concrete existence, and as an elementary particle's behavior for example electron are circulating around an atomic nucleus, and a true state ruling the circulation is a wave function. Also, based on this opinion, it is a normal phenomenon that this electron changes its track in the instant of certain observation (that is, cognition) to another track in the instant of the next observation (that is, cognition), in which sense the behavior surpasses the time and space. This is an understanding of a common opinion of quantum physics. These are, therefore, opinions bringing in a elementary particle as the ultimate of concrete existent matter.

Fig. 6 is a conceptual block diagram to explain a way of thinking about grasping non-concrete existence. With LYEE, as shown by this diagram, stands on an outlook on the world and adapts it to application that either concrete phenomenal existence 503 or non-concrete existence event 501 (In Fig. 5, 501 and 503 are simply regarded as ' phenomenal existence ', but in strictly viewing these are called concrete existence event 503 and non-concrete existence event 501) is composed of quantum which rules the creation of semantic quality 501 called 'logical atom' 601 as an ultimate element of a concept called existence. Further to add, in Fig. 6, the system 505 in which existence can be recognized and the system 507 which forms a complementary set relation with the phenomenal existence and cannot be recognized are called 'explicate order' and 'implicate order, respectively by theoretical physicist David Bohm.

In his work 'New Science and Science of Mind', it is advocated that an 'explicate order,' a world where objective cognition of observation/measurement materializes from various factors of natural science of this 'universe space', does not exist alone by itself but co-exists forming a complementary set relationship (fold in) with a world of 'implicate order' which is a world which is irrecognizable because of no time and space. For this, therefore, semantic quality can be recognized and because a harmony has been established between the two systems as complementary set relationship to each other, the 'explicate system' maintains its order.

Against this opinion, in a theory forming the backgrounds of this invention, either the 'explicate system' concrete existence phenomenon 503 on the non-concrete existence phenomenon 501 exists latent in the 'implicate system' 507 in which any existence phenomenon's semantic quality 501a has been folded in quantum-physically as a behavior of the logical atom 601 that is an elementary particle of a meaning. And, either the concrete existence phenomenon 503 or the non-concrete existence phenomenon 501 is regarded to be embodied as 'modes' as a result that the logical atom 601's entity formed a grouping and materialized an 'attribute' of semantic quality 501a, and this 'attribute' of the semantic quality formed a grouping. According to this thinking, all existences are contained in the 'implicate system'. Therefore, it ought to conclude that a 'correct solution of software (a solution to become true)' against a proposition of software ' is also folded in the 'implicate system' naturally.

A theory forming the backgrounds of this invention is an algorithm which dictates that a quantum of logical atom 601 forms a grouping on the basis of the set theory so as to avoid the Russell's 'irrationality', and elucidates a structural principle that advocates a certain subset concludes to be phenomenal existence 501 and 503, and makes this structural principle into an equation. The equation is called 'associative equation'. Details are referred later.

In LYEE, the equation is inversdy solved only within the phenomenal existence of software. The solution solved inversdy is a function which obtains a correct solution of software from the 'implicate system' for all software propositions (This function is called 'Scenario Function'. Details are explained later. Further to add, the scenario of the Scenario Function was named after a meaning of a scenario in which existence phenomenon proceeds to be embodied.).

In this invention, variables of this function correspond to identifiers 401 which identify word 400 that is a minimum unit of information possessing a meaning in languages uttered as development requirement, and, by substituting word's identifier 401 for the variables, a series of words 201b and a series of codes 201a of software 201 are determined simultaneously (that is, not via the time and space), and, by simulatively reducing the codes 201a, 405, 409 determined as above into the computer space 202 which is regarded as a simulated space of the 'implicate system', it succeeded in embody a required 'semantic quality' 501a.

That is, a relationship between the 'explicate system' 505 and the 'implicate system' 507, which was elucidated by the theory forming this invention's backgrounds (A theory called by a title 'logical atomism' which was established by Fumio Negoro, an inventor of this invention) has been established as a model called 'consciousness model', and its trueness and practicability has been proven by having been actually applied to the phenomenal existence of software.

Also, this theory has made literally a philosophical concept, which was defined by Spinoza,established as a technology, by making it into an algorithm so as to realize reproduction in the field of science and engineering, and, against a natural law which is a premise of invention of all areas concerned with traditional software, this theory has realized a different and new natural law as a theory.

Fig 7 is a conceptual block diagram for explaining a concept of a field coming from the materialization to the embodiment of semantic quality referred to in this invention.

As shown by this diagram, this invention calls explicate system 505 as 'Natural meaning-space' 701 and implicate system 507 as 'Consciousness meaning-space'. A space 717, which intervenes the linear correspondence, or a complementary relation, between Natural meaning-space 701 and Consciousness meaning-space 703, is to be conclusively and inevitably composed of 'Definite meaning-space' 705 and 'Event meaning-space' 709 when the set theory is employed therein, which takes a premise of an elementary particle's existence of the meaning of logical atom 601and uses it as an element of a set. The inevitability is explained later.

A space which becomes a base to establish Natural meaning-space 701, Consciousness meaning-space 703, and all above-mentioned spaces 705, 707 and 709 is called Idea meaning-space' 711. And, in the root of this Idea meaning-space exists is 'Incomprehensible meaning-space' 713 which contains an element of semantic quality 501a that is an element of all existences, and with a premise that it stands on the axiom of the set theory, it concludes that it exists by forming a complementary set relationship with Idea meaning-space 711. Likewise, with a view of setting a concept of the incomprehensible meaning-space 713 and logical atom based on the set theory, LYEE can step out of ideology and can establish the algorithm, while Spinoza regulated an existence by means of ideology with a premise of 'God' in his work The Ethics.

Further to add, Definite meaning-space 705, Event meaning-space 707, Equivalence meaning-space 709 and Natural meaning-space 701 are generally called as 'Cognitive meaning-space' in certain cases. That is, Consciousness meaning-space 703 and Cognitive meaning-space 715 have a complementary relationship to each other. Conclusively, the software structure of this invention corresponds to a program composed of a series of codes which an algorithm of the space 717 that intervenes for linear correspondence in complementary relation between Natural meaning-space 701 and Consciousness meaning-space 703 was made into. Details are explained later.

Here, differences between meanings of an existence composed of substance with a mass and a meaning without a mass, based on their escence, are observed as follows:

(1) While a substance is a concrete existence that can obtain an objective and common recognition as to its scale, nature, performance, etc., a meaning is a non-concrete existence in that cannot obtain an objective and common recognition as to its scale, nature, performance, etc cannot be obtained..

(2) While the former concludes as a mass set, the latter concludes itself only after a cognition is added, in human mind, to the quantum set of a meaning.

(3) While a substance is the one and only from the scientific point of view, regardless of human cognition, a meaning causes differences in cognition of its sender, receiver and other person, therefore it is not the one and only.

In order to further clarify concrete differences between the substance quantum theory as well as the ideological ontology taking 'God' as a premise in Spinoza's The Ethics and the axiomatic set theory of a meaning of this invention, the major points of the theory forming the backgrounds of this invention are explained herein.

That is, as shown by Fig. 7, a stage of the embodiment of 'semantic quality' is Natural meaning-space 701 in which a human can recognize existence phenomenon 510, 503 as they are. When this theory is applied to an existence phenomenon of software, this Natural meaning-space 701 is, for example, a 'stage' where a development requirement 400 composed of a set of words is uttered by the development requiring party as a phenomenon transmitted in language. In information processing system which is developed based on those words, a 'stage' is regarded as 'a medium including a screen et al (Unless mentioned otherwise specifically, a term 'screen' is always used hereinafter.) perceived directly by a human, and via this screen the word's semantic quality 501a is embodied as data code 501, 503, and as a result of human's recognition in mind about what was embodied as an existence event, it becomes a meaning. A meaning, viewed from the point that it is a result recognized in the mind, is neither the one and only nor objective.

Herein, the existence phenomenon 501, 503 exist in two meaning-spaces, Natural meaning-space 701 being the stage of embodiment and meaning-space 717 being the stage of ruling embodiment process. These two spaces 701 and 717 are generally called Cognitive meaning-space 715, as aforementioned. And, in conclusion, software 719 is what has realized on a computer the space 717 which rules a process of embodying word's 'semantic quality'.

This theory concludes that the space 717 which rules this embodying process consists of Definite meaning-space 705, Event meaning-space 707 and Equivalence meaning-space 709. Conclusively speaking, when this theory is applied to the domain of software engineering, it is regulated that: Definite meaning-space 705 correspond to WO2 pallet in this invention, the event mean-space 707 to WO3 pallet in this invention, and Equivalence meaning-space 709 to WO4 pallet in this invention. Details of these are explained later. Further to add, the 'pallet' is meant by a 'flatcar to carry semantic quality (data code)'. That is, it is meant by a field where the subject obtaining semantic quality (called 'Unit-Link'. Details are explained later.) exists.

The origins both of the ruling of embodiment of existence phenomenon in this Cognitire meaning-space 715 and of the existence phenomenon being the ruling's inevitable conclusion, that is, semantic quality 501a of every existence phenomena 501, 503 is what logical atom 601, the ultimate quantum, gathers to form a set based on a rule, and folded into a Consciousness meaning-space 703 established thereabouts. A rule of this 'folding in' is called 'Unit-Link' by this theory. This word 'folding in' was borrowed from a term used in physics. Details of 'Unit-Link' are explained later.

Further to add, a base space to establish this Cognitive meaning-space 715 and Consciousness meaning-space 703 is called Idea meaning-space 711, as already mentioned.

In order for this Idea meaning-space 711 to exist, existence of a space which has a complementary relationship with this space 711 is needed, from the axiom of the set theory, and this space is called Incomprehensive meaning-space 713, as already mentioned.

Fig 8 is a conceptual block diagram for explaining a concept of the Incomprehensible meaning-space 713.

As shown by this diagram, when the root of 'matter like an elementary particle of a meaning' exists in Incomprehensible meaning-space 713, which is positioned to be an origin of existence, in its primitive mode (A 'logical atom' existing in this mode is called 'primitive logical atom' 801.), the following takes place when the set theory is applied to a set composed of logical atom: Both of concrete existence phenomenon 503 and non-concrete existence phenomenon 501 come into being in the way that the primitive logical atom 801 is reflected ('representation' of the set theory) onto Idea meaning-space 711 which originates in Incomprehensible meaning-space 713 and is positioned as its complementary set, thereby building up a set; a SUBSTANCE (equivalent logical atom) and an ATTRIBUTE (dense structure), an element to realize a concept of a philosophical existence in this set, are created and established in Consciousness meaning-space 703; It becomes a MODE (Coupling), an element to establish a philosophical existence passing through Definite meaning-space 705, Event meaning-space 707 and Equivalence meaning-space 709; and it autonomously embodies onto Natural meaning-space 701. What, a human observes it to gush up in the mind corresponds to an existence phenomenon itself. In this context, as a premise of the application of the set theory, this primitive logical atom 801 is to possess two SELF-CAUSEDs which are unique to the logical atom, that is, Deuteronomy-order 801a (which can be indexed by 'i') and a meaning vital force 801c (which can be indexed by 'Vi').

Here, an observation from standpoint of set theory concerning grounds of argument of SELF-CAUSED given to the primitive logical atom 801. As already mentioned, what elements gather is what is perceived by intuition or speculation, what is recognized, that is, after all, an existence phenomenon possessing individual different meanings. The 'possessing individual different meanings' is meant by that the primitive logical atom 801 inevitably assums a 'mission' of SELF-CAUSED to produce such existence phenomenon with a set of elements.

It is a premise of the set theory that the nature of the mission can be defined individually and identified mutually. And, in mathematics, the base of natural rules, only a number is an object of intuition or speculation, and what can be defined and identified as to the number is 'a ordinal number' (indicating the order) and a cardinal number (indicating the quantity, for example, large/small, wide/narrow, long/short, heavy/light, bright/dark, many/few, et al). That is, the mathematical number always assumes with these two natures and never assumes only either one.

In this theory, what corresponds to this order is called 'Deuteronomy-order' 801a and what corresponds to this quantity is called 'a meaning vital force' 801c.

The definition of this SELF-CAUSED is nothing but what LYEE regulated from a mathematical viewpoint for what was defined as follows by Spinoza in his work The Ethics concerning the concept of existence.

The Ethics. By Spinoza:

I. By THAT which is SELF-CAUSED, I mean that of which the essence involves existence, or that of which the nature is only conceivable as existent.

Further to add, in Incomprehensible meaning-space 713, which is a complementary set of Idea meaning-space 711, 'a meaning elementary particle' is not formed yet, and because the primitive logical atom 801 is only existent, which is an origin to establish the 'meaning elementary particle' in Idea meaning-space 711, so the expression, 'a meaning elementary particle-like' is used elsewhere.

Although, the name of 'meaning-space' is given to Cognitive meaning-space 715, Consciousness meaning-space 703 and Idea meaning-space 711 for the convenience,

They are not so-called three-dimensional spaces. In meaning-space the concept of dimension does not exist. Therefore, the concept of dimension shall not exist in those 'meaning-spaces' except the Natural meaning-space 701, unless otherwise specified. Further to add, in LYEE, even a dimension of 'time and space' is even handled as an existence phenomenon, which is presumed to be produced by this theory's algorithm. Details are explained later.

Also, in mathematics a gathering of something is called 'a set', and when a certain rule is defined to this set (The rule may as well be called 'structure' or 'structural rule'. For example, algebraic operation, such as addition and multiplication, and topological structure, such as distance, are corresponding to this rule.), the set is called 'meaning-space'. Unless specified in particular, the terms of 'meaning-space' and 'structure' which are often used by this theory shall mean 'a set in which a certain rule can be defined'. Also, the 'existence' treated by this theory as a subject has the following connotation, as shown by Fig. 5, that the existence phenomenon 501, 503 have a meaning for itself, that is, the existence phenomenon 501 has a meaning different from that of the other existence 503 (which means 'semantic quality' 501a has been established.), in other words, there is a rule to inevitably enable identifying and recognizing the existence as it is, therefore, it has an algorithm by which it is possible to explain logically the relationship among the three parties: the origin of the existence event, the process arriving at the existence phenomenon and the existence event embodies as a conclusion of the process.

In this context, existence is recognized as existence because it is different from others. This is a philosophical truth, and it is a concept which can actually be agreed to if we notice a point that completely identical things cannot exist.

Here, an observation is made onto a 'rule'. A 'rule' is meant to be a system to regulate the inter-relation among elements in stable state. That is, as a premise of a rule, there is the stability (Mathematically, it is called a balance or a harmony or a synchronization, and it is a relation that can be expressed by an equation connecting the left side and the right side by an equal symbol.). By concurrently observing the aforementioned definition of the 'meaning-space' (which is a concept when a certain rule can be defined to a set therein), a rule is necessary to a 'meaning-space', while necessitating the stability to the rule as a premise. Therefore, after all, a 'space' may as well be said to be a concept materialized between elements with stability, or it is what establishes the stability as a result of being based the rule.

Also, if a 'rule' as mentioned above is thought to be a general thing having a broad meaning of the nature possessing a certain structure', the possession of a 'meaning' may as well be said to be synonymous with the possession of a 'rule'. As, a 'meaning-space' is a set possessing a rule of certain elements in a certain space there must be the presence of another 'meaning-space' having a complementary relation with the 'meaning-space', which is a necessary and sufficient condition of the rule. Naturally, this theory is an established theory which satisfies such 'rule'.

Now, in order for all existences to materialize themselves as existence, there must exist both a subset as the limited existence and 'a state not being the existence' as 'having a complementary relation' excluding the subset. This is because by the presence of the 'state not being the existence', the 'presence of the existence' can be identified (the esablishment of 'semantic quality' 501a) by means of comparison with the 'state not being the existence.' The Incomprehensible meaning-space 713 is such space as having the 'state not being the existence'.

As grounds for the argument of making the Incomprehensible meaning-space 713 accorded in the concept of 'meaning-space', a hypothesis was made, as already mentioned, as follows: The primitive logical atom 801 be materialized possessing two natures of the Deuteronomic order 801a and the meaning vital force 801c, as shown by Fig. 8, exactly in the same manner as an atomic nucleus and electrons of the elementary particle atom, which both are of the nature different from each other, establish presence by the action of 'strong force' and 'weak force' as cited by a unified theory of theoretical physics.

Now, the Deuteronomic order 801a is a nature to show the order of the autonomous presentation (or projection) of the primitive logical atom 801 thereabouts existing in the Incomprehensible meaning-space 713. Also, the meaning vital force 801c is a nature of becoming the origin of semantic quality 501a of the existence phenomenon. They are no more than a nature, and it is not until they are vitalized that various actions are actualized. A rule of vitalizing them is called a semantic rule. Accordingly, the Deuteronomic order 801a and the meaning vital force 801c become semantic by the semantic rule 801b.

Speaking conclusively, when this theory is applied to the existence phenomenon of software of the initial development stage, this Deuteronomic order 801a corresponds, for example, to identifier 401 which identifies words transmitted as development requirement 400 and, at the stage of actualizing the development requirement 400 as software in information processing system, the order 801a corresponds to an identifier which identifies data field whose caption includes the words which are established on media composed of Screen, Printouts and File in the information processing system to be developed based on those words.

Also, speaking conclusively, when this theory is applied to the existence phenomenon of software of the initial development stage, this meaning vital force 801c corresponds, for example, to inner motivation, that is, intention or will attempting to transmit words as development requirement 400 and, at the stage of actualizing the development requirement 400 as software in information processing system, the force 801c exactly corresponds to data code which is embodied in the data field whose caption includes the words which are established on media composed of Screen, Printouts and File in the information processing system to be developed based on those words.

The primitive logical atom 801 assuming by these two SELF-CAUSEDs adopts the set theory's premise as it is as values of these two SELF-CAUSEDs are unique and the one and only, and it is hypothesized that the Incomprehensibly meaning-space 713 exists without a limit. Further to add, this primitive logical atom 801 can be regarded as a state vector composed of two SELF-CAUSEDs. This theory can also be said to be quantum physics that explains behavior of this 'state vector'. And, the state vector is generally expressed as a probability distribution function, and this invention too, holds that it is possible to express it as a probability distribution function of normal density (Detailed later.).

The meaning vital force 801c, one of the two SELF-CAUSEDs, can also be regarded as a force to achieve a mission to seek for a stability. This 'stability-seeking' will materialize an existence. This vital force will never be lost during the process of various behaviors (as mentioned later) as long as the 'logical atom' remains as 'logical atom', and it is a nature which works as a force prompting towards various behaviors, in other words, as an instinct or a gene that rules various behaviors of 'logical atom'.

In this 'stability-seeking', there are the following two kinds:

(1) To seek stability as of itself, and
(2) To seek stability as a system inclusive of itself.

'All existences do an action towards stability.' is an obvious providence in light of a rule of entropy of thermodynamics (i.e., When hot and cold matters are mixed, the stability falls onto an middle temperature.). Therefore, all the law of nature can be expressed in an equation by connecting the left and right sides by an equal symbol. An observation on this point is made herein.

It is thought that all existence events have the origin causing them. The 'origin' is an existence of a mother in human's case, and it corresponds to the aforementioned 'implicate order'. The flow from the origin to existence is only one direction, with no reverse direction. In this sense, the flow from the origin to existence is irreversible, the same as a rule of thermodynamics. The same as a hypothesis of quantum physics, the implicate order is to be regarded as an ultimate stable world in which all were folded in. When there is a certain existence phenomenon (which means it was embodied from the origin of existence, and it can be recognized by discriminating from the others), it is hypothesized that elements composing the existence phenomenon be an autonomous reflection from the origin of its ultimate stable world (the Incomprehensible meaning-space 713).

Further to add, the autonomy referred herein is defined in Spinoza's

The Ethics as follows:

III. By <u>SUBSTANCE,</u> I mean that which is in itself, and is conceived through itself; in other words, that of which a conception can be formed independently of any other conception.

That is, it is a nature to work independently with no reliance on the others at all. The rationality of the materialization of subset, unit-team Unit-Link, etc. throughout this theory will never deviate from this definition.

The primitive logical atom 801, the origin of the existence phenomenon, is a projection from the ultimate stable world (the Incomprehensible meaning-space 713), so it naturally becomes unstable (because it is a complementary set of the stability).

To be unstable means that, as aforementioned, it cannot form a meaning-space due to 'the rule of space'. 'Unable to form a meaning-space' also means that a meaning is uncertain. This is because, as mentioned before, if a meaning-space cannot be formed, the rule as a premise is negated, and if the rule is negated, a 'meaning state' is also negated, which is synonymous with 'the rule'. And, 'a meaning is uncertain' means that it has not materialized as an existence. This is because the 'existence' originally means the possession of 'a meaning', and because it is understood that the 'existence' can be distinguished from the others in terms of its meaning.

Speaking above in brief, the 'origin of existence' projected from the 'origin' is unstable and cannot form a meaning space, so the law and the meaning state are negated. Therefore, it cannot be an 'existence'. That is, it was supposed to produce an 'existence' from the 'origin', but the element of the existence phenomenon cannot become an existence phenomenon as it is and it cannot satisfy the initial purpose. Thereupon, the purpose has to be maintained as a role of instinct or a gene which desires the 'element of existence phenomenon' becoming an 'existence phenomenon'. Therefore, the element of all existence phenomena attempts to obtain a meaning state, that is, to seek to be stable. This is the stability-seeking as itself. The stability-seeking as a system is explained later.

In the sense that the primitive logical atom 801 assuming the nature of the meaning vital force 801c exists without a limit, the Incomprehensible meaning-space 713 also assumes the vital force. As aforementioned, the vital force activates a semantic rule 801b which is assumed by the primitive logical atom 801, and the semantic rule 801b makes the nature of the Deuteronomic order 801a and the meaning vital force 801c to be semantic. As a result, in accordance with the law of order, the primitive logical atom 801 autonomously makes projection from the Incomprehensible meaning-space 713. The projected primitive logical atom is called 'logical atom' 802 and distinguished from the primitive logical atom 801, and the stage in the state of the logical atom 802 is called 'Idea meaning-space' 711.

Grounds of argument of making Idea meaning-space 711 accorded in the concept of 'meaning-space' are explained by tracing post-behaviors of logical atom 601, 802 projected from the Incomprehensible meaning-space 713.

The vital force of the Incomprehensible meaning-space 713 has caused autonomous projection of the primitive logical atom 801 from the Incomprehensible meaning-space 713 (This projection is called Deuteronomization), and it did not materialize meaninglessly. Rather, what was Intended thereabouts exactly falls onto only fulfilling its mission to produce 'existence phenomenon'. The condition on the rule to achieve the mission, however, must only be limited to the Deuteronomic order 801a of a nature possessed by the primitive logical atom and the meaning vital force 801c corresponding to the mission of projection.

In order for the projected logical atom 802 to arrive at the formation of existence, while assuming by the one and only nature of the meaning vital force 801c with a mission to produce existence, there must be a law for the formation. As aforementioned, the law means a nature of inevitably becoming a stable state. The law must be based on the only nature that is assumed from the starting point and maintained thereafter, and it must be established by the rule of the set theory.

The nature latent in the logical atoms 601, 802, at this stage is a mission to form existence, and the mission is the set only composed both of the meaning vital force 801c identifying the mission and of the number which is a sum total of the already-projected logical atoms 802 which were produced as a conclusion of the situation of projection.

The meaning that the mission is the formation of existence is that the existence becomes recognizable by itself. The reason for this is that the formation of 'existence' is nothing but obtaining discrimination from the others.

'The existence becomes recognizable by itself' means it must be in a state of stability without changes. Overviewing a stage immediately after a certain logical atom 802 has been projected from the Incomprehensible meaning-space 713, it represents there are the Incomprehensible meaning-space 713 in which the primitive logical atom is forming a set endlessly, as well as a set of logical atoms 802 projected from thereabouts (The number of a set of this logical atom 802 is inevitably less than that of the primitive logical atom 801 left out in the Incomprehensible meaning-space 713, because in the Incomprehensible meaning-space primitive logical atom continues to form a set endlessly.).

That is, two kinds of a set eventually come to exist, which are not stable in terms of a quantity of logical atom composing a set.

Then, the premise was that in order to perform a mission of 'forming existence' the stability had to be realized (stability-seeking as itself), but in the Incomprehensible meaning-space 713 there exist primitive logical atoms 801 endlessly, and the role of the Incomprehensible meaning-space 713 is only to establish the situation where simply the primitive logical atom 801 autonomously project. Thus, the Incomprehensible meaning-space 713 cannot perform an action to direct the two sets to be stable autonomously. This inevitably means (in order to fulfill the aforementioned mission) the action to realize stability must be autonomously performed at the side of the projected logical atom's set. At the same time, a law must be established autonomously to realize the stability. That is, a concept of 'meaning-space' must be established. This is because to realize the stability, an action for stabilization is inevitably necessitated, and this point exactly represents the aforementioned 'law'.

Then, an action in which projected, floating, and unstable logical atom 802's set can perform autonomous stabilization based on a certain rule means to stop the floating. This is because the 'floating' is meant to be an unstable state with a location not fixed. Even to stop the floating, there must also be the law. This is because an action for stabilization, too, is inevitably necessitated, and this point exactly represents the aforementioned 'law'. The concept of stability may as well be said to be a state of balance. This is because the 'stability' can also be regarded to indicate a balanced state.

Then, by what means can the balanced state be formed? The element enabling the formation of the balanced state at this stage is only the total sum of the meaning vital force 801c which is the one and only value assumed by individual logical atoms and that of the logical atom 802 which increases irreversibly. Viewed from the concept of a balance, a state of balance never materializes to the set composed of even number of logical atoms 802 possessing the one and only individual values. The balance can be established (i.e., The stability materializes with a law.) only when (λ-1) power of 3 pieces of the 'logical atom' gather. Grounds for argument with regard to a set comprising the (λ-1) power of 3 pieces are originated from the providence of nature which advocates that, due to its nature, the number of '3' is the number to embody balance or stability, as shown, for example, by the stability of a triangle in mathematics, the stable structure of the three legs of a tripod, the stable structure of a truss in engineering (a structure not requiring a brace) et al. This invention takes this law as a basic proposition. Further to add, the λ is the number of the frequency of the permutation for selecting the (λ-1) power of 3 pieces from the sum total.

By this token, a law by which the logical atom 802 projected from the Incomprehensible meaning-space 713 establishes a concept of a meaning-space is called 'idea rule', and the stage is called Idea meaning-space 711. Further to add, conclusively speaking, this 'idea rule' corresponds to 'Pallet Chain Function', when this theory is applied to the existence phenomenon of software. Details are explained later.

The fundamentals of this theory are only the setting of above-mentioned Incomprehensible meaning-space 713, primitive logical atom 801, Deuteronomic order 801a, meaning vital force 801c, and semantic rule 801b. A hypothesis of setting these premises can be regarded as a truth, and at the same time, by applying the hypothesis to the law of the set theory, an argument thereafter is inevitably induced.

Therefore, an explanation hereafter will be made mainly focusing on how the law (or the law of the set theory) was applied to the aforementioned theory.

Herein, that the logical atom 802's formed the Idea meaning-space 711 is called that the primitive logical atom 801 existing in the Incomprehensible meaning-space 713 'set in the Idea meaning-space 711'.

Explained next is the key to the law that becomes an inevitable conclusion of the Idea meaning-space 711 formed by the 'seated' logical atom 802.

Fig. 9 is a conceptual block diagram for explaining the law by which the logical atom takes a seat in the Idea meaning-space 711.

As shown by this diagram, the logical atom 802 projected from the Incomprehensible meaning-space 713 takes a seat on the Position Locus 901 (corresponding to the so-called universe line in physics). The seating position (called 'a seating point' hereinafter) is affected by the value of the 'positional vital force' 903 possessed by individual logical atoms 802. The 'positional vital force' 903 is an absolute value (|Vi-VB|) of the differences between the Vi and VB, when, placing logical atom 802's meaning vital force 801c in the ascending order, for example when in the Fig. 8, the meaning vital force 801c of the logical atom 802b positioned at the median point is designated as VB905 and the meaning vital force 801c of the logical atom 801b identified by the Deuteronomic order i801a is designated as Vi907.

Also, the reciprocal number of the positional vital force (ri = 1/(|Vi-VB|)) is called as 'a semantic space diameter' or 'a space expanse' of the logical atom. The semantic space diameter ri may as well be said to represent a degree of the meaning expanse. The probability density of the logical atom 802 possessing a semantic space diameter ri in the Idea meaning-space 711 obeys a normal distribution by taking VB as a median point hypothetically, and this theory also adopts this hypothesis. That is, the probability density function of the logical atom possessing a semantic space diameter can be expressed by the following:

[Formula 1]

$$P(ri)= \frac{1}{\sqrt{2\pi}}e^{-\frac{(V_i-V_B)^2}{2\sigma^2}}$$

Fig. 10 is a conceptual block diagram for explaining a structure formed with a law by which the logical atom 802 took a seat in the Idea meaning-space 711.

The 'seating point' is determined by the following rule.

* A logical atom 802, with its before-seating positional vital force (Vi-VB) 903 being a positive value, takes a seat by diverging at the position 910 of the value possessed by the self's positional vital force. The state of this seating is called 'a divergent structure' 911, and such logical atom is called 'a consciousness logical atom' 909.

Herein, a reciprocal number of the consciousness logical atom 909's positional vital force is called a semantic space diameter 1013a of the consciousness logical atom.

* A logical atom 802, with its before-seating positional vital force (Vi-VB) 903 being a negative value, takes a seat by converging at the position 914 (VB - $\varepsilon$). The state of this seating is called 'a convergent structure' 915, and such logical atom is called 'a cognitive logical atom' 913. The $\varepsilon$ is a reciprocal number of the sum total of the meaning vital forces 801c possessed by the primitive logical atom 801 latent endlessly in the Incomprehensible meaning-space 713 and it is a space expanse of the Incomprehensible meaning-space 713.

The reciprocal number of the cognitive logical atom 913's positional vital force is called 'a cognitive logical atom's semantic space diameter' 1013b.

* A logical atom possessing a VB value is called 'a boundary logical atom', and the VB is called 'a boundary vital force' 905.
* A seating point of the boundary logical atom becomes (VB + $\varepsilon$) 906. This is because it is thought that the Incomprehensible meaning-space occupies at the median point. Also, by defining from the median point, the boundary logical atom and the boundary vital force 905 are naturally changed every time the logical atom is deuteronomized.

And, the $\varepsilon$ is a reciprocal number of the sum total of the meaning vital forces 801c possessed by the primitive logical atom 801 latent endlessly in the Incomprehensible meaning-space 713., and it is a minimum vale (908) in the theory concerned with this invention. This value is not zero, nor the infinitesimal, but a finite minimum value of the rational number.

Next, an explanation is made on the inevitability that a seating point of the logical atom with its before-seating positional vital force (Vi - VB) being negative becomes (VB - $\varepsilon$).

This invention is a theory concerning with an existence-embodying mechanism. The origin of the existence takes the irreversibility as an axiom, by originating from the space which is not 'non-existent' but 'existent', so-called the Incomprehensible meaning-space. That is, it takes an axiom that there is no concept such as negative absent in existence.

On the other hand, the probability density of the semantic space diameter ri of the logical atom seating on the Position Locus is subject to have a law of obeying a normal distribution. That is, the probability density of the logical atom distributed on the Position Locus 901 by taking the boundary vital force 905 as a median point is subject to being balanced in a bilateral symmetrical normal distribution. This normal distribution is recognized as a providence of nature by all people. Therefore, it is thought that it is utilized as a law of 3$\sigma$ and a principle of the five-stage evaluation. Further to add, the divergent structure and the convergent structure produced by an idea rule naturally have a complementary relationship with each other.

Now, the logical atom with its before-seating positional vital force (Vi - VB) being negative originally wants to take a seat on the point of the self's meaning vital force Vi, the same as the consciousness logical atom, but its after-seating positional vital force (Vi - VB) cannot become negative (except the calculation of ri) as aforementioned. Therefore, the only point smaller than the amount of the minimum value VB at the same time, a value enabling its after-seating positional vital force (Vi -VB) not to be contained in the negative concept, that is, a value which is infinitesimal (the smallest value of this theory) smaller than VB is accepted. The smallest value in this theory is a reciprocal number ε of the sum total of the meaning vital forces 801c possessed by all primitive logical atoms 801 existing in the Incomprehensible meaning-space 713. That is, it is inevitably the (VB - ε) point that is the seating point 914 of the cognitive logical atom whose positional vital force becomes negative.

Also, the positional vital force of the boundary logical atom becomes (VB - VB) = 0, but the concept of zero cannot exist in the providence of existence. Therefore, as a seating point of the boundary logical atom, the only position the minimum amount larger than VB (the smallest value of this theory) is acceptable. In this theory, the smallest value, as mentioned above, is a reciprocal number ε of the sum total of the meaning vital forces 801c possessed by all primitive logical atoms 801 existing in the Incomprehensible meaning-space 713. That is, the (VB + ε) point inevitably becomes the seating point 906 for the boundary logical atom. The semantic space diameter 1001 of this boundary logical atom becomes maximum (1/ε), and becomes a special logical atom covering the significant space diameter of all logical atoms seated on the Position Locus. The discovery of this boundary logical atom has exactly led to the major point of establishing a set theory that could avoid the 'Irrationality' of Bertrand Russell. Details are explained later.

Logical atoms seated in the Idea meaning-space will inevitably develop into different natures of behavior due to their individual distribution states. Yet, they remain in unstable state in comparison with the number of logical atoms existing in the Incomprehensible meaning-space 713 and the Idea meaning-space 711 and with the sum total of the semaitic space diameters possessed by each of them. Therefore, they continue additional behavior towards the stability. This stability-seeking is the aforementioned 'stability-seeking as a system'. This point is explained herein.

The 'stability-seeking as itself' explained before was after all a mission that the origin of existence be an existence. In contrast, the 'stability-seeking as a system' is a request for balance with the Incomprehensible meaning-space 713. That is, the Incomprehensible meaning-space 713 (as aforementioned) is a space where the primitive logical atom 810 which is an origin of the elementary particle of existence exists without a limit. A space in which the logical atom 802 that autonomously projected from the Incomprehensible meaning-space 713 seated is the Idea meaning-space 711. The vital force of the Incomprehensible meaning-space 713 in which the primitive logical atom 801 that is an origin of all existences exists without a limit possesses a sum total of the meaning vital forces 801 of the primitive logical atoms 801. Therefore, it is meant that it possesses latent infinite vital force and that the semantic space diameter is a world of the infinitesimal (ε) 908.

A world (system) formed by the logical atom projected from the Incomprehensible

meaning-space 713 ('Unit-Link' or 'Coupling' of the Unit-link, which will be explained later.) is unstable compared to the stability of the Incomprehensible meaning-space 713, even if its constituting-element logical atom has established stability by itself. In this context, the stability of the Incomprehensible meaning-space 713, thought to be memorized as information contained in the meaning vital force 801c of each logical atom 802. Consequently, the aforementioned diagram is applicable here too, and an unstable system is subject to being unable to exist as a system because the law and the state of meaning as a system are all negated. Then, an action based on an intention to break through it and to exist as a system (This action may as well be called a 'rule'. This rule is established both in the divergent structure and in the convergent structure which were produced by the law of the Idea rule) will eventually work. This is the 'stability-seeking as a system.

Now, in the divergent structure 911, a rule is established for seeking further a stability as a system. The rule is called 'divergence rule'. Also in the convergent structure 915, a rule is established for seeking further a stability as a system. The rule is called 'convergence rule'. These rules are to form new subsets based on elements of the logical atoms consisting the each of structures. In this connection, in the traditional set theory, if the number of elements of a set is designated as n, the number of subsets is $2^n$ , and all of the subsets are to materialize. The theory of this invention, however grasps these subsets as equivalent to the concept of existence called 'ATTRIBUTE', so all of the $2^n$ pieces do not always materialize. That is, as cited by the aforementioned definition of Spinoza, there must be corresponding 'SUBSTANCE' as a premise of the 'ATTRIBUTE' materialization.

The Ethics. By Spinoza

I. By THAT which is <u>SELF-CAUSED,</u> I mean that of which the essence involves existence, or that of which the nature is only conceivable as existent.

II. A thing is called FINITE AFTER ITS KIND, when it can be limited by another thing of the same nature; for instance, a body is called finite because we always conceive another greater body. So, also, a thought is limited by thought, nor a thought by body.

III. By SUBSTANCE, I mean that which is in itself, and is conceived through itself; in other words, that of which a conception can be formed independently of any other conception.

IV. By ATTRIBUTE, I mean that which the intellect perceives as constituting the essence of substance.

V. By MODE, I mean the modifications of substance, or that which exists in, and is conceived though, something other than itself.

From above in the subsets, the consciousness logical atom takes a permutation by selecting the number of pieces of the power of (λ-1) of 3 from the sum total of consciousness logical atoms, and the same number of divergent dense sets are formed. At the same time, divergent secondary dense sets are also formed, which has a complementary relationship corresponding to each of those divergent dense sets.

The cognitive logical atom, as mentioned above, converges and takes a seat at the (VB - ε) position, therefore, it takes a duplicate permutation by selecting as many the number of pieces as (λ-1) power of 3 from the sum total number's of cognitive logical atom, and the same number of convergent dense sets are formed. At the same time, convergent secondary dense sets are also formed, which has a complementary relationship corresponding to each of those convergent dense sets.

The reason for the 'duplicate permutation' is that, the seating being done by convergence, cognitive logical atoms cannot be identified individually, thus, the permutation had to be what extracts each of them in random.

In other words, the consciousness logical atom takes a seat as indicated by the value of the meaning vital force, whereas, in view of the meaning vital force being the unique value for such of logical atoms, no logical atoms can take a seat on the same seating point. Therefore, each of consciousness logical atoms will never take the same overlapped seat, thus, on the logical atom's forming the part, the number of the formation to be materialized is the same as the number of permutations not allowing overlap.

In contrast, the cognitive logical atom converges and takes a seat at the position on the Position Locus (VB - ε), that is, taking a seat in overlap at the (VB - ε) position (905). Therefore, on the cognitive logical atom's forming a subset, the number of the formation cannot help being the same as the number of the permutation allowing the overlap.

And, in 'ATTRIBUTE' which is a subset (dense set) formed by 3's power (λ -1) pieces of Logical Atoms' gathering its subset (dense set) has never been formed unless corresponding "SUBSTANCE' exists. As what deals with the SUBSTANCE, there is no other option than an independent and homogenous Logical Atom possessing a semantic space diameter (This state is called 'equivalent'.) approximately equal to the total of the semantic space diameters possessed by the dense set which is an ATTRIBUTE of each of them, (that is, in the divergent dense set, it is a Consciousness Logical Atom, and in the convergent dense set, it is a Cognitive Logical Atom.). This is because there are no other conditions but the 'equivalent' condition at this point. This independent logical atom and the subset has built a mutually equivalent relationship, that is, a balanced relationship, resulting forming a new space.

Fig. 11 is a conceptual block diagram for explaining the concept of the Unit-Link. In the equivalent relationship, a certain unique nature is ought to be produced inevitably. This nature corresponds to an aforementioned concept called semantic quality 501a. This semantic quality 501a can be regarded as inheriting the equivalent logical atom 1103's meaning vital force 801a and semantic space diameter 801c, but the semantic quality is neither the vital force 801a nor the diameter 801c. That actually forming the nature that is not exactly as they are is synonymous with the formation of a new SUBSTANCE (logical atom) by projection 1107.

As shown by this diagram, this equivalent relationship 1105 can be regarded as if it was produced by the proliferation (1107) of the logical atoms assuming a new nature called semantic quality 501a. It is an act of a mission to perform balancing with the Incomprehensible meaning-space 713 (that is, the stability-seeking as a system). The relationship between the dense set 1102 and its equivalent logical atom 1103 in the behavior is called 'Unit-Link' 1109, and the equivalent logical atom is called 'Equivalent Logical Atom' 1103a.

An axiom of the set theory is that, this 'Equivalent Logical Atom' 1103 ais projected into a new space (1107) from the Idea meaning-space. This can also be agreed from the premise of this theory advocating that multiple SUBSTANCES of the identical nature must not exist in the same space. That is, if the space is different, the premise of this theory can be satisfied. The space induced therefrom is a 'Consciousness meaning-space' or 'Cognitive meaning-space', which are explained later.

Fig. 12 is a conceptual diagram for explaining a corresponding relationship between Unit-Link 1109 and a program.

As shown in this diagram, when this theory is applied to the existence phenomenon of a software, it is the equivalent logical atom 1103 that can distinguish Unit-Link 1109 assuming a new semantic quality 501a. The Equivalent Logical Atom 1103 assumes the Deuteronomic order 1103a, so the Deuteronomic order 1103a conclusively corresponds to an identifier of data field 1205 and 405b which are posted on media such as Screen, Printouts and File and data field 1205 and 405b of their corresponding memory address. Also, a semantic quality 501a produced in the Unit-Link corresponds with a data code 1207 which is embodied in the data fields 1205 and 405b. In addition, the equivalent relationship 1105 and 1209 correspond to process logic 1211 and 405d which embodies data code to the data field 1205 and 405b.

As mentioned later, the semantic quality 501a produced in the Consciousness Unit-Link embodies passing through the Definite meaning-space 705 established in the 'Definite Unit-Link', the Event meaning-space 707 established in the "Event Unit-Link', and Equivalent meaning-space 709 established in the 'Equivalent Unit-Link', and what has been embodied herein exactly corresponds to the origin of individual words uttered as a development requirement 400.

Fig. 13 is a conceptual diagram for explaining the law of the formation of a Unit-Link produced from the Consciousness Logical Atom, that is, a Consciousness Unit-Link.

As shown in this diagram, the distribution rule formed in a divergent structure establishes the same number of distribution dense sets 1301 as permutations selecting the (λ - 1) power of 3 number of pieces from the sum total of Consciousness Logical Atoms. It means that, in this set, a new vital force which is a total of the semantic space diameters 1031c of the logical atoms 802 belonging thereto. The law possessed by this vital force is called 'Consciousness Rule' 1303. This Consciousness Rule 1303 becomes a mission and a rule to establish a Unit-Link for the purpose of 'stability-seeking as a system.

Also, every time the distribution dense set 1301 is formed, its complementary set is inevitably formed because of the set's law. The complementary set is called a distribution secondary dense set 1302. As the distribution secondary dense set 1302 is a complementary set of the distribution dense set 1301, it is a subset to be produced when the distribution dense set 1301 established thereupon is arranged in the descending order every time the distribution dense structure is formed. A 'Volition Rule' is established there. The Volition Rule will have a role of activating the self's Consciousness Rule 1303. The reason is that a mission maintained at this point can be nothing but the 'stability-seeking as system. This mission is handled by the 'Consciousness Rule' 1303. In order for the Consciousness Rule to be established perform the mission, there must be something that can materialize the Consciousness Rule 1303 so as to perform the role of the Consciousness Rule 1303. Viewed from the axiom of the set theory, this 'something' must be its complementary set. This is because all existences are distinguished that is, established, by their existence based on a complementary set as a premise, that is. As the complementary set is a distribution secondary dense set 1302, the Volition Rule established therein exactly activates the Consciousness Rule.

In the birth order of the Volition Rule which is established in this manner (A set positioned first in the order corresponds to the distribution dense set 1301, formed the last in the permutation which selects the (λ - 1) power of 3 pieces, that is, the permutation which selects all Consciousness Logical Atoms 909.), the Volition Rule activates the self's Consciousness Rule 1303.

By treating Consciousness Logical Atom 1305, which possess a semantic space diameter smaller than and in the vicinity of the sum total of the semantic space diameters of the logical atoms 802 positioned at odd number positions of the logical atom's row in which the meaning vital forces of the Consciousness Logical Atom 909 consisting the self's distribution dense set 1301 are placed in the ascending order, as corresponding to the self's distribution dense set, the activated Consciousness Rule 1303 performs the formation of the distribution dense set 1301. As if one can recognize self existence as SUBSTANCE by cognizing the image of the self reflected on the mirror, and the distribution dense set 1301 establishes the self's set as a true solution of proposition, by the existence of the Consciousness Logical Atom 1307 which is regarded as corresponding to itself (1305).

The Consciousness Logical Atom 1305 in this instance is called an Equivalent Logical Atom 1307. The condition of this materialization is synonymous with the 'pre-established harmony' cited by Reipniz's idealism. This invention terms this as the 'Unit-Link' 1109 being established between this Equivalent Logical Atom 1307 and the distribution dense set 1301. Such Unit-Link is called 'Consciousness Unit-Link' 1309.

The reason that an odd number position was selected in obtaining the sum total of logical atoms is to extract a realistic representative value of establishing a stable structure, the (λ - 1) power of 3. This is a law that can be agreed upon in light of a principle of a balance. That is, in a balance in a stable state there are three elements, namely, right dish left dish and a median point, and a stable state is represented in that a total value of the weights of the right dish left dishes (odd number positions of the three elements) are added to the median point.

Also, 'smaller' is used for the purpose of selecting a logical atom nearest to the semantic space diameter 908 of the Incomprehensible meaning-space 713 for attaining balance with the Incomprehensible meaning-space 713 (its semantic space diameter is the minimum ε 908). Also, 'nearest' is used because semantic space diameters of individual logical atoms possessing unique values based to that there cannot be the same value as their sum total in a strict sense. Therefore, the closest value, that is, the nearest one had to be chosen.

Also, the premise that the logical atom's meaning vital force 801c is unique leads to that a logical atom whose semantic space diameter is completely identical to that of a subset cannot exist. Accordingly, the 'nearest' relation is a minimum value that is ultimately indivisible and cannot be 'infinitesimal'. This becomes the backgrounds for avoiding the Russell's infinite irrationality. Details are explained later.

Also, based on the set theory, the Equivalent Logical Atom 1307 of the Consciousness Unit-Link must be interpreted as what was projected in another space by the Consciousness Logical Atom consisting a divergent structure existing in the Idea meaning-space 711. This space is called a 'Consciousness meaning-space' 703.

Fig. 14 is a conceptual diagram for explaining a law of the formation of Cognitive Unit-Link, that is, a Unit-Link formed from the Cognitive Logical Atom.

As shown in this diagram, a Convergence Rule established in the convergent structure 915 produces in the Idea meaning-space 711 the same number of convergent dense set 1401 as the duplicate permutation selecting (λ - 1) power of 3 pieces from the sum total of Cognitive Logical Atoms 913. In this convergent dense set 1401, a new vital force has been produced by the same reason as in the production of the aforementioned Consciousness Rule 1303. This vital force is called 'Cognitive Rule' 1403. The vital force of this Cognitive Rule intends to establish a Unit-Link 1109 so as to perform the 'stability-seeking as a system, the same as in the Consciousness Rule's case.

By the law of the set theory, every time the convergent dense set is produced, a complementary set is inevitably produced of a convergent dense set 1401, which is obtained by rearranging the duplicate permutation in descending order of the semantic space diameters of the Cognitive Logical Atom 913 consisting the produced convergent dense set 1401. This complimentary set is called a 'secondary convergent dense set' 1405. In the secondary convergent dense set composed of the unique logical atoms first-selected from the order (The first-positioned is a convergent dense set produced as the last, i.e., a set containing all Cognitive Logical Atoms 913, that is, a secondary convergent dense set 1405 of the largest set), a 'Contingent Rule' 1402 is established, which activates the self's Cognitive Rule.

The Contingent Rule 1402 has a role for activating the self's Cognitive Rule 1403. This is because a mission maintained at this point can be nothing but the 'stability-seeking as a system'. The 'Cognitive Rule' 1403 performs the mission. In order for the Cognitive Rule 1403 to be established to perform its mission, there must be something that established the Cognitive Rule 1403 in a way to perform the Cognitive Rule's role. The 'something' must be a complementary set of it, based on an axiom of the set theory. This is because all existences are distinguished by, that is, established, their existence based on a complementary set as a premise. The complementary set is a secondary convergent dense set 1405, therefore, the Contingent Rule 1402 established therein exactly activates the Cognitive Rule 1403.

However, both the convergent dense set 1401 and its complementary set secondary convergent dense set 1405, are not always a dense set 1102 composed of the unique logical atoms because of being a convergence. Therefore a Unit-Link cannot be established as they are. That is, the calculation for determining Equivalent Logical Atoms cannot be done. Therefore, the dense set 1102 composed of the unique Logical Atoms has to be determined. The dense set 1102 composed of the unique Logical Atoms cannot be searched unless rearranging the Cognitive Logical Atoms 913 consisting the already-produced convergent dense set 1401 in the descending order of their semantic space diameters. By rearranging this way, the dense set 1102 composed of the unique Logical Atoms is searched one by one.

For example, the following are possible duplicate orders of selecting any possible number of pieces from three Cognitive Atoms having a>b>c relationships in term of the semantic space diameter, then the duplicate orders being rearranged in the descending order of semantic space diameters possessed by the Constituent Logical Atoms:

a a a, a a b, a a c, a b b, a b c, a c c, b b b, b b c, b c c, c c c, a a, a b, a c, ....

Herein, for example, though a a a, a a b, etc. are false existence that cannot originally be existent, they look as if existent because they converge therein. And, at the fifth place, the secondary convergent dense set 1405 composed of the one and only semantic space diameter of individual Logical Atoms can be found for the first time, that is, an existence of not false but true subset. This dense set 1102 is a dense set possessing the largest semantic space diameter composed of all Cognitive Logical Atoms 913.

In this way, the materialization of the Unit-Link 1109 by the Cognitive Logical Atom 913 will differ from the case of the divergent dense set 1301 because its distribution is in the 'convergent' state. A rule produced in the secondary convergent dense set 1405 composed of this first-found unique Logical Atom is called a 'Contingent Rule' 1402.

Now, the 'Contingent Rule' 1402 produced in the secondary convergent dense set 1405 composed of this first-found unique Logical Atom activates the self's Cognitive Rule 1403. The activated Cognitive Rule 1403 attempts to form a Unit-Link whose Equivalent Logical Atom 1409 is Cognitive Logical Atom 1407 that possesses a semantic space diameter nearest to and larger than the sum total of the semantic space diameters of logical atoms located at odd number positions in a Logical Atom row that was produced by arranging Cognitive Logical Atoms of the convergent dense set 1401 belonging to the self in the ascending order of their semantic space diameters.

Fig. 15 is a conceptual block diagram for explaining the state of the formation of a Unit-Link by the first Contingent Rule.

But, this Unit-Link does not normally materialize as shown in Fig. 15. This is because, since the secondary convergent dense set 1401 which could produce the Contingent Rule 1402 is a set composed of the first-found unique Logical Atoms, the set contains all of the Cognitive Logical Atoms 913, which leads to that the Equivalent Logical Atom 1501 which is able to form the Unit-Link 1102 with the convergent dense set 1401 containing such Logical Atoms can never be selected from Cognitive Logical Atoms.

The only possible logical atom is the Boundary Logical Atom 906 possessing a semantic space diameter covering all logical atoms existent in the Idea meaning-space.

The Boundary Logical Atom 906, however, is not the Cognitive Logical Atom 913 but the Consciousness Logical Atom 909. This Boundary Logical Atom 906 possesses the semantic space diameter 1001 covering the logical atom 802 as aforementioned, so it can be judged, from the secondary convergent dense set 1405, as corresponding its semantic space diameter to the self's semantic space diameter. Therefore it narrowly satisfies the condition of Unit-Link formation. However, very possibly this Boundary Logical Atom 906 has already formed the Consciousness Unit-Link 1309, so it inevitably cannot complete the formation of a Unit-Link with the secondary convergent dense set 1405. It can be, so to speak, regarded as an imitative Unit-Link that could distinguish (1407) the Boundary Logical Atom 906 as the Equivalent Logical Atom 1409 of the secondary convergent dense set 1405, even though a Unit-Link 1102 is not established in the strict sense. A state as such is called a 'Definite Unit-Link' 1413. That is, this Unit-Link 1102 is a false Unit-Link it is a imitative.

On the other hand, the Consciousness Unit-Link 1309 is a true Unit-Link as a proposition, as aforementioned. As explained later, a Unit-Link which is true as a proposition shall possess the condition for the meaning of word being able to be grasp as the one and only. Because a Unit-Link which is false as a proposition cannot perform a mission possessed by the Primitive Logical Atom 801 as it is, a true Unit-Link will continue additional behavior so as to obtain a solution to be true (that is, a balanced state with the Incomprehensible meaning-space 713), as a proposition.

The Contingent Rule 1404 produced in the secondary convergent dense set 1405 composed of the second unique Logical Atom is, the same as in the first Contingent Rule 1402, attempts to form a Unit-Link by activating the self's Cognitive Rule 1401. This state is shown by Fig. 16.

As shown in this diagram, this Cognitive Rule 1401 cannot autonomously find the logical atom 1501 that should be made an 'Equivalent Logical Atom', because it takes a convergent state. What can become the one and only 'Equivalent Logical Atom' is only the Boundary Logical Atom 906 which possesses a semantic space diameter covering all logical atoms. However, the Boundary Logical Atom 906 has already been used as an Equivalent Logical Atom of the definite Unit-Link 1403, so it cannot be selected as an Equivalent Logical Atom. The formation of the Unit-Link 1102 for performing the mission to establish the balance (the stability-seeking as a system) with the Incomprehensible meaning-space, however, is positioned as a supreme order. Therefore, a Logical Atom Equivalent with the convergent dense set 1401 has to be sought for by all means.

Fig 16 is a conceptual block diagram for explaining the state of the formation of a Unit-Link by the second Contingent Rule.

The only possible condition 1601 is as follows: A Unit-Link that can distinguish semantic quality of all existence phenomenon as the one and only has been established in the Consciousness meaning-space, so there must be a divergent dense set 1301 existing in the Consciousness Unit-Link 1309, which corresponds with the second convergent dense set 1405.

By imitating the semantic space diameter possessed by the Equivalent Logical Atom 1307 of the Consciousness Unit-Link 1309 composed of the divergent dense set 1301 as a semantic space diameter of the Equivalent Logical Atom 1307 corresponding to the second-positioned convergent dense set 1401, either one of the Cognitive Logical Atoms 913 is intended to be determined as the Equivalent Logical Atom 1307 of the second convergent dense set 1401. This is because the Consciousness meaning-space 703 is a complementary set of the Cognitive meaning-space 715, and by its law there always ought to exist an applicant approximate to the semantic space diameter corresponding to an Equivalent Logical Atom.

This can be considered as an action 1601 of the second Cognitive Rule to obtain an applicant to become the self's Equivalent Logical Atom 1307 from the Consciousness meaning-space 703 via the Equivalent Logical Atom 1409 corresponding to the Definite Unit-Link 1413. This action is called 'Revelation' 1415, 1601.

This to-be-applicant Consciousness Unit-Link 1309 emerges, so to speak, and is recognized as an answer against a Revelation from the second contingent rule (This is called 'Reception' 1410.). However, in order for a Consciousness Unit-Link to emerge to be recognized as an answer against the Revelation 1415, 1610, a condition is necessitated for being able to intervene a convergent structure and a divergent structure. What satisfies the condition enabling the establishment of this intervention is only the Consciousness Unit-Link 1309 that takes the Boundary Logical Atom 905, which possesses the semantic space diameter 1001 covering all logical atoms consisting the convergent and divergent structures, as the Equivalent Logical Atom 1103, 1307. This Consciousness Unit-Link is called a 'Consciousness Unit-Link where "the Kuh" .is established'.

Fig. 17 is a conceptual block diagram for explaining grounds of an argument for the establishment of the 'Consciousness Unit-Link' where "the Kuh" is established.

Now, in the case of the Consciousness Unit-Link 1309, the relationship between the divergent dense set 1301 and the Equivalent Logical Atom 1307 was as follows: By placing the meaning vital forces 801c of the Consciousness Logical Atoms 909 belonging to the divergent dense set 1301 in the ascending order, it determines the Equivalent Logical Atom 1307 by selecting a logical atom possessing the semantic space diameter 1305 that is the nearest to but smaller than the sum total of the semantic space diameters of the logical atoms positioned at odd number positions in the order. Concerning the condition of founding this Consciousness Unit-Link 1309, it is natural that the Equivalent Logical Atom 1307 exists outside the divergent dense set 1301, in light of the condition of the small and nearest semantic space diameter as shown in Fig. 17, it can also exist inside the divergent dense set 1301.

Fig. 18 is a conceptual block diagram for explaining a scheme of avoiding Bertland Russell's irrationality.

As shown in this diagram, the relationship of the Equivalent Logical Atom existing inside this divergent dense set is called, by this theory, as 'inner infinity' 1801. However, this 'inner infinity' 1801 has a meaning different from the mathematical infinity cited by Kantor and Russell.

On the other hand, in the case of the Cognitive Unit-Link, the relationship between the convergent dense set 1401 and the Equivalent Logical Atom 1409 is as follows: By placing the semantic space diameters of the Cognitive Logical Atoms 909 belonging to the convergent dense set 1401 in the ascending order, it determines the Equivalent Logical Atom 1409 by selecting a logical atom 1407 possessing the semantic space diameter that is the nearest to but larger than the sum total of the semantic space diameters of the logical atoms positioned at odd number positions in the arrangement.

Concerning the condition of founding this Cognitive Unit-Link 1309, the Equivalent Logical Atom 1409 will never exist inside the convergent dense set 1401 in view of the condition of the larger and nearest semantic space diameter, and it will always exist outside. This nearest relation is called 'outer infinity' 501a.

Here, the 'inner infinity' 1801 where is the Equivalent Logical Atom is existent inside the dense set is called 'the Kuh' and the 'outer infinity' 501a where it exists outside is called 'the "Non-Kuh'. And, the divergent dense set also naturally exist, which contains the Boundary Logical Atom 906 with possession of the semantic space diameter covering all logical atoms 802 existing in the Idea meaning-space. The Equivalent Logical Atom corresponding to the divergent dense set containing the Boundary Logical Atom is inevitably the Boundary Logical Atom 906 only that possesses the largest semantic space diameter in the divergent dense set. That is, as Unit-Link 1109 which takes the Boundary Logical Atom 906 as a common logical atom, "Consciousness Unit-Link 1309', 'Definite Unit-Link 1413' and 'Revelation 1415' are inevitably established.

That is, according to this theory, an infinite set taking components based an infinite set cited as 'irrationality' by Bertland Russell can be considered, thus what the infinite set, i.e., the whole is cannot be regulated. By concluding that the set theory of taking infinite domain as a premise contains inconsistency, this theory advocates that the infinite domain indispensable from the set theory viewpoint is satisfied in the Incomprehensible meaning-space. On the other hand, in order to justify the rationalization of this theory, the set theory is applied onto the Idea meaning-space which is established by the projection of finite pieces of the logical atoms from the Incomprehensible meaning-space that is an infinite domain. Therefore, the theory can conclude only in the finite world. That is, the infinite domain shall be grasped by limiting to the Idea meaning-space 711 that is a finite world. This is a reason why the Bertland Russell's 'irrationality' of the infinity can be avoid.

Bertland Russell's 'irrationality' of the infinity cites that, although an infinite set taking an infinite set as its components can be considered, there is no limit to such a set, so a concept of the whole cannot be grasped. Against this Russell's 'irrationality', this theory advocated that "The SELF-CAUSED which is metaphysically the smallest unit that is ultimately indivisible" is designated as a 'Logical Atom' 601 (definition). Being based on the Logical Atom means that it does not apply to the infinitesimal concept, but that it is rather treated as a finite world. This, too, constitutes a reason for avoiding the Bertland Russell's 'irrationality' of the infinity.

In other words, the outer infinity 501a is convergence because it is a convergent dense set composed of the 'whole' of the Cognitive Logical Atom 913, therefore it is 'the wholly uncertain' that is, synonymous with 'infinity' in the set theory. An Equivalent Logical Atom Equivalent to the 'infinity', which can be identified concretely, exists outside the convergent dense set (This is not 'uncertainty'.). Thus, it is called outer infinity 501a, thereby discriminating from the Bertland Russell's infinity .

In contrast, the inner infinity 1801 is 'limited' therefore synonymous with 'finite' because it is a subset composed of the divergent dense set materialized by finite pieces of Consciousness Logical Atom, and an Equivalent Logical Atom equivalent to the subset, which can be identified concretely (This is not 'uncertainty'.), exists inside the divergent dense set. Thus, it is called inner infinity 1801, thereby discriminating from the Bertland Russell's infinity. This inner infinity 1801 and the outer infinity 501a shall become equivalent via the Boundary Logical Atom 906.

By the way, also in the Consciousness Unit-Link in which 'the Kuh' has been established a structure called a secondary consciousness structure 1411 is inevitably formed as its complementary set due to the law of set. A rule is established in this secondary consciousness structure 1411. This rule corresponds to a role of the reception (1410) of the Revelation 1415, and it answers that the semantic space diameter of the Consciousness Unit-Link 1309's divergent dense set 1301 is what corresponds to the semantic space diameter possessed by the equivalent to Logical Atom convergent dense set, so as to form additional Cognitive Unit-Link to attempt a balance with the Incomprehensible meaning-space. An action leading to this answer is called 'Association' 1416.

What receives the action of this Association 1416 is the third Contingent Rule 1418. The reason that the third contingent rule is that the first and second Contingent Rules have already performed their mission with the Revelation 1415, which inevitably leads to the remaining third Contingent Rule 1418 being the only one to receive an action of Association 1416. The third Contingent Rule 1418 activates the self's Cognitive Rule by receiving an action of Association 1416. The Cognitive Rule attempts to form Unit-Link 1109 from the self's convergent dense set. That is, it attempts to choose a Cognitive Logical Atom possessing a semantic space diameter 1407 equivalent to the convergent dense set 1401. The semantic space diameter is a value that has already emerged by an action of Association 1416, so the logical atom possessing that value ought to exist in Cognitive Logical Atoms. A state established in this manner is called Event Unit-Link 1417.

By the formation of this Event Unit-Link 1417, it shall be interpreted that, based up on the set theory, the Event Unit-Link's Equivalent Logical Atom is what the Cognitive Logical Atom consisting a convergent structure existent in the Idea meaning-space has been projected onto another space. This space is called an "Event meaning-space' 707.

The semantic space diameter of this Event Unit-Link 1417's Equivalent Logical Atom is approximately equivalent to that of the Equivalent Logical Atom 1307 of the Consciousness Unit-Link 1309 in which 'the Kuh' has been established. This can lead to that, conclusively, when this theory is applied to an existence phenomenon of software, the data code which was auto-generated by the Homogeneity Vector of W03 pallet is equivalent to the semantic space diameter of the divergent dense set 1301 of the Consciousness Unit-Link 1306 in which 'the Kuh' is established. This point is additionally explained later.

However, the semantic space diameter happens to be larger or smaller than the value of the semantic space of the convergent dense set forming a Definite Unit-Link. In such a state, however the formation of the Event Unit-Link 1417 is limited to the case where the semantic space diameter's larger than the value of the semantic space of the convergent dense set having formed a Definite Unit-Link, so in the case where the Equivalent Cognitive Logical Atom's semantic space diameter is smaller, an attempt of the Event Unit-Link 1417 ends with refusal and the Cognitive Logical Atom 'recurrence' as a Consciousness Logical Atom.

Every time the Event Unit-Link 1417 is formed, a complementary set of the Event Unit-Link 1417 is formed. This complementary set is a Unit-Link's complementary set, so the complementary set must be an element consisting the Event Unit-Link 1417, that is, a subset composed of the duplicate permutation that selects $\beta$ pieces of elements from the $\beta$ pieces of Cognitive Logical Atoms belonging to the Event Unit-Link's convergent dense set 1401.

Then, as the $\beta$ pieces of the Cognitive Logical Atoms are duplicate permutation composed of a convergent structure, the number of subsets becomes $\beta^\beta$ pieces. The formation of the $\beta^\beta$ pieces of subsets consisting this Event Unit-Link 1417's complementary set in this way is called a Breakup 1701 and this subset is called a 'Secondary Event unit-link' 1703. This is synonymous with the projection of the $\beta^\beta$ pieces of the Equivalent Logical Atom into the Event meaning-space.

However, upon second thought, viewed reflecting on the event meaning-space in light of the concept of space, the law, stability, balance et al cannot be found in the set composed of mutual Equivalent Logical Atoms of the $\beta^\beta$ pieces of the Event Unit-Link. That is, the initial mission of balancing with the Incomprehensible meaning-space has not been fulfilled, so additional behavior must be continued.

Thereupon, a rule for additional behavior is produced so as to form a law composed of mutual Equivalent Logical Atoms of the $\beta^\beta$ pieces of the Event Unit-Link into respective elements of the Secondary Event Unit-Links 1703. The rule is called a 'Secondary Event Rule 1705. The Secondary Event Rule 1705 operates upon its formation and works so as to bring all of the Secondary Event Unit-Link 1703's elements with a law being satisfied. That is, all Equivalent Logical Atoms of the Secondary Event Unit-Link 1703 attempt to form a set and to change such set into Unit-Link.

However, viewing upon second thought again, in a set composed of duplicated logical atoms out of the $\beta^\beta$ pieces of subsets as well as in a set which, although not duplicated, has arrangements of semantic space diameters not in the ascending order the formation of Unit-Link cannot be realized because the Unit-Link formation condition cannot be satisfied. The formation of Unit-Link can be realized only in cases of a set composed of non-duplicated Logical Atoms at the same time of a set with its semantic space diameter arrangements in the ascending order. After all, there is only one option which enables the formation of Unit-Link. The Unit-Link formed in this manner is called an 'Equivalent Unit-Link' 1419.

Viewed from the set theory standpoint, by the formation of this Equivalent Unit-Link, the Equivalent Logical Atom of the Equivalent Unit-Link shall be interpreted as what the Cognitive Logical Atom existing in the Event meaning-space has been projected onto another meaning space. This space is called 'Equivalent meaning-space' 709. An action of forming this Equivalent meaning-space 709, that is, the formation of one Unit-Link from the $\beta^\beta$ pieces is called 'Regulation' 1707. And, the Equivalent Unit-Link inherits, inevitably by Breakup, the nature of the Event Unit-Link 1417's Equivalent Logical Atom.

Likewise, the Definite Unit-Link 1413 and the Event Unit-Link 1417 are produced by a cooperation with Consciousness Unit-Link, i.e. by the actions of the heading 1402 of the secondary convergent dense set 1405, the third Contingent Rule 1418 and its Cognitive Rule. In contrast, the Equivalent Unit-Link 1419 is produced by the actions of the Secondary Event Unit-Link 1703 and the Secondary Event Rule 1705 established thereabouts but it has no direct tie-up with the Consciousness Unit-Link, even though it inherits the Consciousness Unit-Link 1417's nature because of inheriting, by Breakup, the nature of the Event Unit-Link 1417's Equivalent Logical Atom.

The logical atom of the Equivalent Unit-Link 1419 is also composed of Cognitive Logical Atoms, the same as the Definite Unit-Link 1413 and Event Unit-Link 1417, while the way of the formation of the logical atom is different from these of the Definite Unit-Link 1413 and Event Unit-Link 1417, as explained above. This is because the intent of the providence of existence is to establish synchronization with the Incomprehensible meaning-space 713, that is, a balance of the Incomprehensible meaning-space in terms of the number of logical atoms on each side, thus a tie-up only aimed at a balance with the Consciousness meaning-space 703 in terms of the number of logical atoms must be avoided.

However, even with the formation of the Equivalent meaning-space 709, the balance has not yet been established when the number of logical atoms there is compared with that of the Incomprehensible meaning-space. Thus, additional behavior shall be continued.

Now, every time the Equivalent Unit-Link 1419 is formed, a complementary set of the Equivalent Unit-Link 1419 is formed. This complementary set is a Unit-Link's complementary set, so it must be a subset composed of the duplicate permutation selecting β pieces from the elements consisting of Equivalent Unit-Link 1419, that is, the β pieces of Cognitive Logical Atoms belonging to the Equivalent Unit-Link 1419's convergent dense set. The β pieces of the Cognitive Logical Atoms are the duplicate permutation composed of a convergent structure, so the number of their subsets becomes $\beta^{\beta}$ pieces. This subset is called a 'Secondary Equivalent Unit-Link' 1709.

This is synonymous with the projection of the $\beta^{\beta}$ pieces of the Equivalent Logical Atom onto the same space as the previous Equivalent meaning-space, which is similar to the case of the Secondary Event Unit-Link.

However, upon second thought, viewing the Equivalent meaning-space at this stage in light of the concept of space, the law, stability, balance et al cannot be found in mutual Equivalent Logical Atoms newly added. That is, the initial mission of balancing with the Incomprehensible meaning-space has not been fulfilled, so additional behavior must be continued. Thereupon, a rule for additional behavior is produced into the Secondary Equivalent Unit-Link 1709. This rule is called 'Secondary Equivalent Rule 1711.

The Secondary Equivalent Rule 1711 operates upon its formation. Different from the Secondary Event Rule mentioned above forming the Equivalent Unit-Link, the Secondary Equivalent Rule 1711 attempts to establish a law between the heading Equivalent Unit-Link produced by the Secondary Event Rule and the second Equivalent Unit-Link 1419 produced by the Equivalent Unit-Link.

That is, by comparing the first and second Equivalent Unit-Links 1419 in terms of respective semantic space diameter of each Equivalent Logical Atoms when the first one is larger, its convergent dense set 1401 is regarded as a master and the other convergent dense set 1401 as a minor, then an additional Equivalent Unit-Link 1419 is produced by an action called 'Coupling' 1713. In other words, the *Coupling* 1713 means the formation of an additional Unit-Link produced between unit-links. A state like this corresponds to the 'Mode'. Details of an action of *Coupling* are explained later.

When the *Coupling* 1713 of the Equivalent Unit-Link 1419 has been established, the Secondary Equivalent Unit-Link 1709 is produced, the same as the Equivalent Unit-Link 1419 is produced from the Event Unit-Link 1417 against the Equivalent Unit-Link 1419 which through Coupling 1713. Likewise, in the Equivalent meaning-space, there exist the Equivalent Unit-Link 1419 produced from the Event Unit-Link 1417 together with the Equivalent Unit-Link 1419 which is a Coupling (1713) of the Equivalent Unit-Links 1419. Both become an object for additional *Coupling,* thereby continuing the Coupling just like the fission by the nucleonic chain reaction. Then, the *Coupling* (1713) forms 'Unitization'. The unitized Equivalent Unit-Link is called 'Natural Unit-Link' 1421. In addition, the Natural Unit-Link 1421's Coupling embodies a phenomenon. This action is also called 'Coupling' 1713.

Explained hereafter is the method of the 'Coupling' action and the meaning of the 'Unitization'.

I. Coupling 1713 of Equivalent Unit-Link 1419

The Coupling condition of the Equivalent Unit-Link 1419 is satisfied between two Equivalent Unit-Links 1419 having a relationship between the semantic space diameters of the Equivalent Logical Atoms being ra > rb. An action to build the third Equivalent Unit-Link 1419 (the Coupled 1713 Equivalent Unit-Link 1419) is called 'Unitization', supposing the bigger Equivalent Unit-Link to be a major and the smaller to be a servant. The Unit-Link is also an Equivalent Unit-Link 1419.

The Coupling 1713 of the Equivalent Unit-Link 1419 is commenced by the Secondary Equivalent Rule 1711.

One piece out of the $\beta^{\beta}$ pieces of Equivalent Unit-Link 1419 which were broken up from the Event Unit-Link 1417 formed by the β pieces of Logical Atoms is the same set as the Event Unit-Link 1417, but the others are a set in which the β pieces of Logical Atoms were duplicated.

However, by Coupling 1713 the duplication is excluded. On the other hand, the number of Logical Atoms of the Unit-Link is based on $3^{\lambda-1}$, but by Coupling (1713) there are some cases where the number end up being the even-number.

The Coupling 1713 between two Equivalent Unit-Links 1419 satisfying the Coupling condition is performed as follows. That is, the ρ pieces of logical atoms of the master equivalent unit-link 1419 and the σ pieces of Logical Atoms of the servant Equivalent Unit-Link 1419 are placed in the ascending order (small→large) in terms of each semantic space diameter r, and each semantic space diameter r is compared with its corresponding one in the order. When the relationship becomes $r_{\rho} < r_{\sigma}$, the $r_{\sigma}$ Logical Atom is added to the master Logical Atom to make it as a constituent element of the third Unit-Link. The relationship $r_{\rho} \geqq r_{\sigma}$ is excluded.

Logical Atoms to become targets for comparison are up to the σ-th servant Logical Atom if the number of Logical Atoms is $\rho \geqq \sigma$, whereas they are up to ρ-th servant Logical Atom if the number is $\rho < \sigma$.

In the former case, the master Logical Atoms whose order is σ+1-th or more becomes constituent of the third Equivalent Unit-Link 1419 as they are. In the latter case the servant, Logical Atoms whose order is ρ+1-th or more is excluded. At this stage, if there are duplicate Logical Atoms in the third constituents, sequentially later positioned ones are eliminated.

By rearranging the third constituents into an ascending order in terms of it semantic space diameters and obtaining a sum total of the semantic space diameters of Logical Atoms existent at odd number positions, and if the semantic space diameter is larger than the servant semantic space diameter at the same time the proliferation of Logical Atoms having the nearest semantic space diameter at the positive (+) side is established, the Coupling 1713 is actualized by taking it as an Equivalent Logical Atoms of the third Equivalent Unit-Link 1419. It does not matter even if the Equivalent Logical Atoms are the other Equivalent Unit-Link 1419's Logical Atoms.

In this instance, if the semantic space diameter becomes larger than the master semantic space diameter and the proliferation to construct the third Equivalent Unit-Link 1419 taking it as an Equivalent Logical Atom is established, the Coupling shall become completed.

If the Coupling completes, the Coupling stops thereabouts.

The semantic diameter corresponding to the Coupled Equivalent Unit-Link 1419 becoming larger than the master semantic space diameter, the Coupling 1713 stops, so this is called a stop condition of the Equivalent Unit-Link 1419's Coupling 1713.

By expressing the semantic space diameter of the master Equivalent Unit-Link 1419 as r1, the semantic space diameter of the minor Equivalent Unit-Link 1419 as r2, the semantic space diameter of the Coupled Equivalent Unit-Link 1419 as r3, and the established Coupling as $(r1 > r2) \rightarrow r3$, then a condition of Coupling 1713 continuously occurring is as follows*

That is, $r2 < r3$ and $r3 < r1$

or $r2 > r3$ and $r3 < r1$

When the Coupling 1713 is established five consecutive times and the last Equivalent Unit-Link 1419 built one after another satisfies the stop condition, the Equivalent Unit-Link 1419 is called a 'Unitized Equivalent Unit-Link'. This is expressed as follows. That is,

(1)$(r1 > r2) \rightarrow r3$,
(2)$(r1 > r3) \rightarrow r4$,
(3)$(r1 > r4) \rightarrow r5$,
(4)$(r1 > r5) \rightarrow r6$,
(5)$(r1 > r6) \rightarrow r7$, at the same time $r1 < r7$.

The reason why five continuous Couplings are necessary in order to become a Unitized Equivalent Unit-Link is explained below.

A relationship of 7 pieces among the first-Coupling Equivalent Unit-Links is changed as follows. That is,
$r7 > r1 > r6 > r5 > r4 > r3 > r2$

Herein, in the following Coupling process of this part, a master does not appear and a stable set is not formed because even number positions are one-sided. That is,
$r3 > r2$,
$r5 > r4 > r3 > r2$
$r1 > r6 > r5 > r4 > r3 > r2$ A master does not appear in the following Coupling process. That is,
$r4 > r3 > r2$
$r6 > r5 > r4 > r3 > r2$

In the former relationships, if r3 is regarded as a master, then a master has appeared and a stable set has been formed, but a stable set of a Coupled set requires Equivalent Logical Atoms as covering the master, so in these relationships, it is insufficient for r3 to become Unitized Equivalent Unit-Link's Equivalent Logical Atom.

In the latter relationships, if r4 is regarded as a master, a master has appeared and a stable set has been formed, but both r6 and r2 become deviating from the stop condition, thus the r4 cannot become Unitized Equivalent Unit-Link's Equivalent Logical Atom.

As a result, a Coupled set which satisfies all conditions is the case of already-mentioned Unitization in which a master appears to satisfy the stop condition, while realizing a stable set without one-sidedness on odd-number positions.

The Unitized Equivalent Unit-Link can be regarded as a combining relationship among 7 approximately equal circles. The set becomes a regular hexagon when the master Equivalent Logical Atom is placed in the center and median points of the 6 outer circles are connected. This regular hexagon is called an hyper set (SUPER-STRUCTURE).

If all the diameters of the 7 pieces of Equivalent Logical Atoms are ≒ r , the SUPER-STRUCTURE of the Natural Unit-Link has its area H ≒ $3 \sqrt{3} \cdot r^2 / 2$ to be a specific value. The SUPER-STRUCTURE is a set that includes the specific value as a slice of itself and becomes Natural meaning-space covering the Incomprehensible meaning-space 713.

The specific value of the SUPER-STRUCTURE in the Equivalent meaning-space 709 must be a rational number, so it becomes $3r^2$. The original value to be gravitated is this value.

The Unitized Equivalent Unit-Link is duplicated, with a mass, as an element of the Natural meaning-space 701, so it cannot become again an object of the Coupling in the Equivalent meaning-space 709. The Coupled Equivalent Unit-Link 1419 existent in the Equivalent meaning-space 709 and the Equivalent Unit-Link 1419 to be Coupled 1713 will never become a servant again under the same master, but there are no other restrictions. Therefore, when a master-servant relationship is established, it can become a master-servant of Coupling 1713 repeatedly.

The master-servant Equivalent Unit-Link 1419 will never disappear even after the established of Coupling 1713, and it will exist together with the other Equivalent Unit-Links 1419. Therefore, the Equivalent meaning-space 709 becomes a set body taking the Equivalent Unit-Link 1419 and the Coupled 1713 Equivalent Unit-Link 1419 as its elements.

All the Equivalent Logical Atoms of the Equivalent Unit-Link 1419 produced from the same Event Unit-Link take the same semantic space diameter, so the Coupling 1713 never takes place among those Unit-Links.

Designating $\tau$ to the number of Unit-Link's Logical Atoms and 8 to the number of odd-number positions to determine the Equivalent Logical Atom, a relationship between both becomes as follows:

That is, $\delta = [(\tau - 1)/2]$

The probability of increase in the number of Logical Atoms upon every Coupling 1713 becomes $(n + 1)/2^n$ (n: the frequency of Coupling 1713).

(2) Coupling 1713 of Natural Unit-Link 1421

The Natural Unit-Link 1421' Coupling is performed between Natural Unit-Links 1421 designated by the secondary natural set but not based on the size condition of respective semantic space diameters of the Equivalent Logical Atoms. Except it, the rule of Coupling 1713 is all the same as in the case of the Equivalent Unit-Link 1419.

A Unit-Link built by Coupling 1713 also becomes a Natural Unit-Link 1421. Natural Unit-Link 1421 to be Coupled and a Coupled Natural Unit-Link 1412 are both elements of the Natural meaning-space.

The Coupling 1413 of the Natural Unit-Link 1421 has no establishing condition, and it will never stop as long as the proliferation actualizes. Thus, the Coupling 1713 of the Natural Unit-Link 1421 shall continue endlessly.

When all servant constituents are taken into the Coupled 1713 Natural Unit-Link 1421, the Coupling is an assimilation. When the servant constituent part is taken into the Coupled (1713) Natural Unit-Link 1421, the Coupling 1713 is a memory.

The assimilated Unit-Link's constituent will never be reproduced by another Coupling 1713. But, some memorized unit-link's constituent will be reproduced by another Coupling.

Our awareness represents the case where the Unit-Link of this reproduction is established. A memorized Unit-Link my be assimilated or vice versa. A Unit-Link produced by the Natural Unit-Link 1421's Coupling represents a transfer of phenomenon, so in some cases it can be called a Transfer Unit-Link.

The future and past we mean is a Transfer Unit-Link by the act of a memory. Therefore, existence and phenomenon are mutually complementary from the point of view of the providence of existence but it does not mean both are in a subordinate relationship. A concept of the past and the future must be considered, semantically, not existent. That is, what can grasp the past and future as semantic existence can be nothing but the present cognition.

A Coupling of Natural Unit-Link 1421 in which we become a master is an action of life,

a Coupling of Natural Unit-Link 1421 produced outside of us is an action of nature,
a Natural Unit-Link 1421 produced by an action of life is a life phenomenon,
and a Natural Unit-Link 1421 produced by an action of nature is a natural phenomenon. They are so called and discriminated.

All things in nature including us are nothing but phenomena produced by Coupling 1713 of the Natural Unit-Link 1421. We cannot establish our awareness against the Transfer Unit-Link produced by assimilation based on us as a master. Our awareness is a Transfer Unit-Link produced by memory based on us as a master.

When I produce a Transfer Unit-Link by memory, I can be aware of it.

When I produce a Transfer Unit Link by assimilation, I cannot be aware of it.

This leads to that, a meaning is not possessed by the word's semantic quality itself, but it is established for the first time by the awareness of differences between the word's semantic quality and the other words' semantic quality. That is, the awareness of the difference (that is, a meaning) of semantic quality possessed by every word is produced by intervening memory, and it is destined to cause indefiniteness that the awareness' varies from person to person. However, the production of semantic quality itself of individual words relied upon the aforementioned theory, so there is no room of an entry of arbitrariness.

That is, the awareness of differences of word's semantic quality varies with each person, so this invention has sealed it within the range of the person's free activity and advocated algorithm of a scheme enabling the creation of word's semantic quality as the one and only without an entry of arbitrariness, which can be applied to software production.

In Consciousness meaning-space 703, Definite meaning-space 705 and Event meaning-space 707, a Coupling 1713 is not performed, so neither the time nor the space exists. In Equivalent meaning-space 709, a Coupling 1713 of the Equivalent Unit-Link 1419 is performed, but the stop condition is justified thereabouts. Thus a continuous time and space like in the Natural meaning-space 701does not exist. A continuous time and space is established only in the Natural meaning-space 701.

A Transfer Unit-Link produced by memory becomes a Transfer Unit-Link to established additional memory. The same goes with the case of Assimilation. A Transfer Unit-Link established by Assimilation may become a Transfer Unit-Link which materializes memory, or a Transfer Unit-Link established by memory may become a Transfer Unit-Link which materializes Assimilation.

A Coupling 1713 in the Natural meaning-space 1421 can be summarized as follows. That is, even though a Coupling 1713 in which the Natural Unit-Link 1421 with a smaller semantic space becomes a master, can memorize the Natural Unit-Link 1421 corresponding to the larger semantic space diameter, the possibility of Assimilation is probable. This is because it is very probable that the Natural Unit-Link 1421 with a small semantic space diameter be disintegrated until reaching Assimilation.

On the other hand, the Natural Unit-Link with a larger semantic space diameter can memorize and assimilate small events. For example, I have a possibility of assimilating or memorizing the sun. There is no possibility, however, of assimilating the sun even if I possess the possibility of memorizing the sun. The reason is that there are too much differences in the number of Transfer Unit-Links of both events, and that before I can assimilate the sun all my Transfer Unit-Links are disintegrated.

Above-mentioned is an explanation on clarifying the meaning of the Unitization.

Inevitably said from the above relation, the Natural Unit-Link 1421, for example, the origin of the reason why words transmitted as a development requirement, that is, existence phenomenon, were its existence phenomenon, means to be a semantic space diameter of the divergent dense set 1301 which is the one-side element consisting of the 'Consciousness Unit-Link 1309 in which the *Kuh* is established..

The origin divergent dense set 1301 is inevitably given a mission by the providence of existence to identify a Logical Atom possessing a semantic space diameter equivalent to the self's semantic space diameter, that is, a Logical Atom having a relationship of complementary set. The mission-given divergent dense set 1301 obtains the Equivalent Logical Atom 1307 as its solution. And, a state of having obtained a solution is called 'the Consciousness Unit-Link 1309 is established'. Here, we can visualize a picture where semantic quality 502 aiming to be an existence phenomenon is produced in the Consciousness Unit-Link 1309, and only the semantic quality of the Consciousness Unit-Link in which the Kuh by taking a Boundary Logical Atom as an Equivalent Logical Atom will be led to an existence phenomenon.

Therefore, the divergent dense set 1301 corresponds to a 'proposition' that it desires to produce existence phenomena, and its Equivalent Logical Atom corresponds to its 'solution'. And, the Natural Unit-Link is exactly an existence phenomenon, that is, a projection of its 'solution'. This leads to that the origin to specify a certain existence phenomenon as existence phenomenon, for example, the origin which discriminates the existence phenomenon of words transmitted by the requiring party as a pre-software requirement of from existence phenomenon other than the existence phenomenon specifying as words, is a relationship between the divergent dense set 1301 of the Consciousness Unit-Link 1309 where the 'Kuh' is established and the Equivalent Logical Atom 1307, that is, exactly an action of the Consciousness Unit-Link.

The relationship between the divergent dense set 1301 and the Equivalent Logical Atom 1307 is a balance relation, that is, what is established by the law of complementary set.

As explained above, here is an 'internal structure of existence' considered as a mechanism by which all existence phenomena are positioned as an origin of existence by forming this divergent dense set 1301 and the Equivalent Logical Atom the Consciousness Unit-Link and the Definite Unit-Link 1413, the Event Unit-Link 1417 and the Equivalent Unit-Link 1419 which are a Cognitive Unit-Link embody the origin of existence into an existence phenomenon.

To be noted here is that a Unit-Link is produced by the approximately equivalent relationship and it forms a new semantic quality, and it indicates the above-mentioned relationship between the proposition and the solution. This point is observed additionally.

The nature of the Primitive Logical Atom is the one and only not allowing the existence of two of the same nature. This is a hypothesis taken by this invention as a premise. This hypothesis is what the premise of the set theory is applied to as it is. This leads to that, when semantic space diameters of the Logical Atom (1407) of the convergent dense set and that of its Equivalent Logical Atom 1409 are compared, it indicates that a completely equivalent relationship has never materialized.

The already-mentioned ($\lambda$ - 1) power of 3 pieces' providence being a law is based on the background that this approximate equivalent relationship is produced. Also, it is thought that to be able to give something a meaning different from others as it is, is equal to the fact that there is a 'complementary set relationship' among elements consisting it, and because the 'complementary set relationship' is approximately equivalent, such distinction can be made as they are different with one another but the nearest to the self. A 'meaning' and 'existence' are of such state, that is, a state as enabling cognition that something is close to but different from the self. This is a theoretical conclusion of this invention.

Speaking an allegorical story, the relationship of one electron and a nucleus is not only the meaning of hydrogen but also existence. Also, the relationship of two electrons and a nucleus is the meaning of helium as well as the existence of helium. Those can be regarded as a part of the conclusion of this theory.

In this 'existence', a structure, existence with a mass, and software, a semantic existence, are also included. That is to say that it can be interpreted that an existence phenomenon of software can be made existent in the Consciousness meaning-space 703 by means of the Consciousness Unit-Link 1309 which is made of the divergent dense set 1301, a proposition, and, its Equivalent Logical Atom 1307 a true solution. Accordingly, the proposition of software, that is, the requirement definition 201b, and the solution to software, that is, the program 201a composed of a series of codes, are concurrently existent in the Consciousness meaning-space 703.

However, this Consciousness meaning-space 703 is different from the Natural meaning-space 701 that human can be aware of in their daily lives. Therefore, in order to obtain a proposition in the Consciousness Unit-Link 1309, the proposition having given a solution of words transmitted as a software requirement, there must be an established form and contrivance of materializing what is existent in the Consciousness meaning-space 703 into the Natural meaning-space 701. This established form and contrivance is called 'Reduction'. Explanation is made later on this point.

4.2.3 Into Algorithm

Based on the above explanation, in the existence phenomenon resulting from human's cognition of a 'meaning entity', a structure shall always exist authoritatively, in which the identifier recognizing a meaning entity and the Consciousness Unit-Link 1309 established the 'Kuh' identified by the same identifier exist together in the Consciousness meaning-space 703,.

The structure of this theory which leads a certain meaning to be recognized can be said to be universal because of its law and the inevitability based on it, therefore it can be expressed in the form that is commonly recognizable in general, that is, as an equation. This equation is called an 'Association Equation'.

The same as the Schrodenger's wave equation existing as a hypothesis to express physical phenomenon in the quantum world, it may as well be thought that this 'Association Equation' is what, by applying an 'meaning entity' to the quantum-mechanical world, has additionally attached a mechanism for humans to recognize a meaning.

Further to add, if not overstating, this Schrodenger's equation cannot directly be proven for its correctness, but is merely and indirectly presumed to be correct because existence of situations contradicting to what is described in this equation are not recognized. This application does not originally intend to prove the correctness of the aforementioned law that might be thought to have been developed from this Schrodenger's wave equation. However, if the commonality between meaning existence and physical existence is observed, the correctness of the aforementioned law can be presumed. Nevertheless, the purpose of this application falls onto the appropriate disclosure of the invention that causes a prescribed and great effect by applying a uniform law to the existence phenomenon of software. And, the equation on which this invention is based can be said to be what demonstrates its correctness with effects produced actually as a result of its application implemented to date at a number of corporations, as mentioned later.

Returning to the above description of the equation, what has made the process leading to this existence phenomenon into algorithm is a theoretical expression of this invention called the aforementioned 'Association Equation'. That is, the equation can be given by the following:

$$rj = Tij(ri)$$

In this Associative Equation, the dependent variable rj has a meaning of semantic quality differentials in the natural meaning-space 701, and the independent variable ri is a semantic quality 501a in the Consciousness meaning-space 703, and Tij is called 'space duplication function'. Also, the subscript j is an identifier of word 400 which is regarded as the smallest element of a means to recognize a meaning in the Natural meaning-space, and the subscript i is an identifier which has regarded the word 400's identifier i as equivalent with the Deuteronomic order i possessed by the Equivalent Logical Atom 1307 of the Consciousness Unit-Link 1309.

The 'space duplication function' in this Associative Equation takes, as independent variables, the Deuteronomic order I, which is assumed on the Equivalent Logical Atom 1307 corresponding to the Consciousness Unit-Link 1309 in the theoretical space Consciousness meaning-space 703, and the semantic space diameter ri induced into the Consciousness Unit-Link 1309, therefore, it is an invisible existence for humans belonging to the Natural meaning-space 701 and impossible to specify. Thereupon, the Association Equation to linearly determine the corresponding relation between the Consciousness meaning-space 703 and the Natural meaning-space 701 is to be devised, so that it can be justified in the relationship among the definite meaning-space 705 composed of the Definite Unit-Link 1413, the Event meaning-space 707 composed of the Event Unit-Link 1417, and the Equivalent meaning-space 709 composed of the Equivalent Unit-Link 1419, which are elements consisting the providence of existence based on this invention.

Fig. 20 is a conceptual diagram for explaining the providence of existence more from the cubic point of view (also called 'cubic surface diagram' hereinafter).

That is, in this diagram, Definite meaning-space 705, Event meaning-space 707 and Equivalent meaning-space 709 are copied by two-dimensional surfaces, and they are corresponded to one another as a closed space. Also, Consciousness Unit-Link 1309 in the Consciousness Unit-Link 703 is corresponded as positioning in a space surrounded by the closed space.

In such a diagram, first in Definite meaning-space 705, Definite Unit-Link 1413 is disclosed (1415) into Consciousness Unit-Link 1309 that establishes the 'Kuh', and, as next, semantic quality 501a induced into Consciousness Unit-Link 1309 makes Association (1416) and is grasped by Event Unit-Link 1417, then, semantic quality 501a of Consciousness Unit-Link 1309 grasped by the Event Unit-Link 1417 is handed over to the Equivalent meaning-space 709 by Regulation.

The Equivalent Unit-Link 1419 in the Equivalent meaning-space 709 makes Coupling from its Equivalent Unit-Link 1419 and performs Unitization, and the product thereabouts embodies into the Natural meaning-space 701 as Natural Unit-Link 1421, that is, existence phenomenon. A series of these processes can be grasped by means of a diagram.

Now, the Fig. 20, which has corresponded the providence of existence into a more cubical conceptual diagram, indicates the grasping of semantic quality ri (501a) of the Consciousness Unit-Link1309 in the Consciousness meaning-space 701 through the process that has reversed the process during which, in the Natural meaning-space 701, the semantic quality (ri) 501a corresponding to a word with a meaning ri makes Association 1417 and Coupling 1713, but excluding the formation of the Definite Unit-Link and disclosure, and in this reverse process the Definite Unit-Link 1413 and disclosure 1415 satisfying the necessary and sufficient condition of the providence of existence become unnecessary.

The Definite Unit-Link 1413 has a role to determine Consciousness Unit-Link 1309 but not inducement from the Consciousness Unit-Link 1309, so theoretically it becomes impossible to grasp semantic quality 501a of the Consciousness Unit-Link 1309 in the Consciousness meaning-space 703 from the word to identify the existence phenomenon able to specify in the Natural meaning-space 703.

Thereupon, so as to enable grasping semantic quality 501a of the Consciousness Unit-Link 1309 in the Consciousness meaning-space 703 from the word to identify the existence phenomenon able to specify in the Natural meaning-space 703, the Consciousness Unit-Link 1309 is treated as the starting point, though the Definite Unit-Link 1413 is the starting point viewed from the providence of existence, when necessary correspondence is given to the providence of existence in the cubical diagram, and the following additional scheme is made in order to satisfy the providence of existence.

Fig. 21 is a conceptual diagram for explaining such a devised scheme to satisfy the providence of existence, while treating the Consciousness Unit-Link 1309 as the starting point.

That is, in the process 2100 on the providence of existence, both divergent structure and convergent structure are produced simultaneously by the Idea Rule, and in each of the structures, Divergent Rule and Convergent Rule are produced simultaneously. As a result, divergent dense set 1301 and secondary divergent dense set 1302, as well as convergent dense set 1401 and secondary convergent dense set 1405 are produced simultaneously.

Next, a Volition Rule established in the secondary divergent dense set 1302 activates a Consciousness Rule established in the divergent dense set 1301, resulting in all Consciousness Unit-Links 1309 being established all at once and simultaneously. On the other hand, what has materialized by activating a Cognitive Rule 1403 produced in the first convergent dense set 1401 of the Contingent Rule that is produced accidentally by the condition of how secondary convergent dense sets 1405 also produced simultaneously are arranged, becomes Definite Unit-Link 1413. The second 1404 of the Contingent Rule plays the role of Revelation 1415, and the third 1418 of the Contingent Rule is regarded as an Event Unit-Link established by an action of Association 1416. These are based on the providence of existence.

Accordingly, it is true that the starting point of the existence phenomenon is undoubtedly Definite Unit-Link 1413, but the Consciousness Unit-Link 1309 with accepts the Definite Unit-Link 1413's Revelation 1415 is already existent inevitably. Therefore, the process taking the Consciousness Unit-Link 1309 as the starting point shall satisfy the providence of existence.

That is, as shown by the process 2102 taking Consciousness Unit-Link 1309 as the starting point in Fig. 21, a slice of semantic quality 501a of the Consciousness Unit-Link 1309 viewed from the Definite meaning-space 705 is induced (2101) in the Definite Unit-Link 1413. The induced semantic quality is duplicated (Revelation 1415, Association 1416) into the Event meaning-space 707, then in the Event Unit-Link 1417, a slice of semantic quality 501a of the Consciousness Unit-Link 1309 viewed from the Event meaning-space 707 is induced (2103) and the induced semantic quality is synthesized (2104) with the slice 2101 induced by the Definite Unit-Link. Then, the synthesized semantic quality is duplicated (Regulation) into the Equivalent meaning-space 709. In the Equivalent Unit-Link 1419, a slice of semantic quality 501a of the Consciousness Unit-Link viewed from the Equivalent meaning-space 709 is induced and the induced semantic quality is synthesized (2106) with the slice duplicated from the Event meaning-space. This results in producing the equivalent value 2107 with the original providence of existence.

Fig. 22 is a conceptual diagram for explaining the 'spatial simulation' based on this invention.

The relationship descried in Fig. 21 can be expressed as a vector synthesis on a cubical surface diagram as shown by Fig. 22. This is called a 'spatial simulation.

As shown in Fig. 22, a structure of this 'spatial simulation' designates Consciousness meaning-space 703 as a space formed surrounded by two-dimensional surfaces of the following three kinds:
Definite meaning-space 705, Event meaning-space 707 and Equivalent meaning-space 709. And, the following names are given:

II. The two-dimensional surface expressing Definite meaning-space705 is called W02,
III. The two-dimensional surface expressing Event meaning-space709 is called W03,
IV. The two-dimensional surface expressing Equivalent meaning-space707 is called W04.

All of which are called 'Pallet'.

Further to add, for distinguishing Equivalent Unit-Link materialized from Event Unit-Link from Equivalent Unit-Link materialized by the Coupling of Equivalent Unit-Link, the following divided names are given:

V. W02G corresponding to Event meaning-space produced from Event Unit-Link
VI. W04P corresponding to Equivalent meaning-space produced from Equivalent Unit-Link materializing from Event Unit-Link
VII. W04 corresponding to Equivalent meaning-space produced from Equivalent Unit-Link materializing by the coupling of Equivalent Unit-Link.

Details are explained later. The Consciousness Unit-Link (1309) shall exist in the spatial point surrounded by the three-kind two-dimensional surfaces, and the Definite Unit-Link 1413, Event Unit-Link 1417 and Equivalent Unit-Link 1419 are identified by taking the Deuteronomic order 801a of their representing Equivalent Logical Atom 1409 as an identifier. A Unit-Link per each identifier belongs to each pallet and becomes pallet's element. The pallet performs a role of a flatcar for carrying a 'what will become a meaning' from the complementary set domain 2201 of the Natural meaning-space 701 to the Natural meaning-space 701.

Fig. 23 is a conceptual diagram for explaining a method for establishing the law of the providence of existence as algorithm.

The semantic qualtity 501a of the Consciousness Unit-Link 1309 is grasped as shown by Fig. 23 in accordance with the directional relation with the other Unit-Links.

I. to (6) of the diagram represent the following. That is,
VI. Definite Unit-Link 1413 grasped by Consciousness Unit-Link
VII. Event Unit-Link 1417 grasped by Consciousness Unit-Link
VIII. Equivalent Unit-Link 1419 grasped by Consciousness Unit-Link

IX. Slice of Consciousness Unit-Link grasped by Definite Unit Link 1413
X. Slice of Consciousness Unit-Link grasped by Event Unit Link 1417
XI. Slice Consciousness Unit-Link grasped by Equivalent Unit Link 1419

The direction of Definite Unit-Link 1413, Event Unit-Link 1417, Equivalent Unit-Link 1419 and Consciousness Unit-Link is as shown by 2100 of Fig. 21, from the providence of existence. The whole of this directional action is expressed by $\Phi_n{}^{-1}$ and called an 'Association Function'.
The reverse direction is expressed by $\Phi_n$ and called a 'Synchronous Function'.

By expressing semantic quality of Consciousness Unit-Link as Wi and semantic qualities induced to Definite Unit-Link 1413, Event Unit-Link 1417 and Equivalent Unit-Link 1419 as $L^2{}_{wi}$, $L^3{}_{wi}$ and $L^4{}_{wi}$, respectively, the above (1) to (6) can be defined respectively as follows. That is,

$$(1)' : \Phi_2{}^{-1} (Wi) = L^2{}_{Wi}$$

$$(2)' : \Phi_3{}^{-1} (Wi) = L^3{}_{Wi}$$

$$(3)' : \Phi_4{}^{-1} (Wi) = L^4{}_{Wi}$$

$$(4)' : \Phi_2 (L^2{}_{Wi}) = W^2 i$$

$$(5)' : \Phi_3 (L^3{}_{Wi}) = W^3 i$$

$$(6)' : \Phi_4 (L^4{}_{Wi}) = W^4 i$$

The above (1)', (2)' and (3)' are Associative Equations expressed by developing the Associative Equation **rj=Tij(dj)** into the aforementioned spatial simulation, and on the other hand (4)', (5)' and (6)' are called Synchronous Equation. Also, $L^2{}_{Wi}$, $L^3{}_{Wi}$, and $L^4{}_{Wi}$ are called 'data factor'.

The Associative Equation expresses as a solution an algorithm to determine semantic quality Wi (501a) assumed by Consciousness Unit-Link 1309. The right ahead superscript of semantic quality 501a denotes a pallet which semantic quality 501a belongs to, and the subscript I denotes a Deuteronomic order 801a for identifying Equivalent Logical Atom of Consciousness Unit-Link 1309. The Synchronous Equation grasps a slice of semantic quality 501a assumed by Consciousness Unit-Link 1309 as a solution. The $W^2 i$, $W^3 i$ and $W^4 i$ each express a slice of semantic quality Wi 501a assumed by Consciousness Unit-Link 1309.

In the spatial simulation, the Consciousness Unit-Link 1309 and its slice are corresponded to each other as equivalent by vector synthesis as follows. That is,

$$\mathbf{Wi = W^2 i + W^3 i + W^4 i \ \ldots\ldots\ldots\ldots\ldots\ldots \ (7)}$$

$$\mathbf{= \Phi_2 (L^2{}_{Wi}) + \Phi_3 (L^3{}_{Wi}) + \Phi_4 (L^4{}_{Wi}) \ldots\ldots (8)}$$

The Definite Unit-Link 1413 and Event Unit-Link 1419 are neighbored to the Consciousness Unit-Link 1309 based on the providence of existence, so their semantic quality 501a in the spatial simulation can be regulated in accordance with the providence of existence. By the providence of existence, the Equivalent Unit-Link 1419 is produced from the Event Unit-Link 1417 by regulating action, whereas in the spatial simulation it is produced from the Consciousness Unit-Link 1309. So, the truth or falsehood is too incomplete to determine. As a result, the expression (8) is not justified as it is. For this reason, a factor to compensate $L^2{}_{Wi}$, $L^3{}_{Wi}$, and $L^4{}_{Wi}$ is required. The factor is expressed by $Y^2{}_{Wi}$, $Y^3{}_{Wi}$, and $Y^4{}_{Wi}$, respectively and called 'logical factor'.

A compensation related matter concerning the expression (8) is placed as follows. That is,
$L^2{}_{Wi} \rightarrow (L^2{}_{Wi} + Y^2{}_{Wi})$
$L^3{}_{Wi} \rightarrow (L^3{}_{Wi} + Y^3{}_{Wi})$

$L^4_{Wi} \rightarrow (L^4_{Wi} + Y^4_{Wi})$

Resulting from this compensation, the expression (8) is rewritten as follows. That is,

$$Wi = \Phi_2 (L^2_{Wi} + Y^2_{Wi}) + \Phi_3 (L^3_{Wi} + Y^3_{Wi}) + \Phi_4 (L^4_{Wi} + Y^4_{Wi}) \quad (9)$$

With the 'spatial simulation, the 'Synchronous Function' can be integrated, so if it is expressed simply by "Φ" ' the expression (9) is revised as follows. That is,

$$Wi \cdot \Phi Y^2_{Wi} = \Phi (L^2_{Wi} + (L^3_{Wi} + Y^3_{Wi}) + (L^4_{Wi} + Y^4_{Wi})) \quad (10)$$

To develop explanation further, the semantic quality of the logical factor is explained herein.

The logical factor $Y^3_{Wi}$ rules a relation of duplicating Equivalent Logical Atom 1307 corresponding to the Consciousness Unit-Link 1309 determining Definite Unit-Link 1413 as Equivalent Logical Atom 1307 corresponding to the Consciousness Unit-Link 1309 determining Event Unit-Link 1417.

The logical factor $Y^4_{Wi}$ rules a relation of duplicating Equivalent Logical Atom 1307 corresponding to the Consciousness Unit-Link 1309 determining Event Unit-Link 1417 as Equivalent Logical Atom 1307 corresponding to the Consciousness Unit-Link 1309 determining Equivalent Unit-Link 1419, or duplicating Equivalent Logical Atom 1307 corresponding to the Consciousness Unit-Link 1309 determining Definite Unit-Link 1413 as Equivalent Logical Atom 1307 corresponding to the Consciousness Unit-Link 1309 determining Equivalent Unit-Link 1419.

The logical factor $Y^2_{Wi}$ rules a relation of duplicating Equivalent Logical Atom 1307 corresponding the Consciousness Unit-Link 1309 determining Equivalent Unit-Link 1419 as Equivalent Logical Atom 1307 corresponding the Consciousness Unit-Link 1309 determining Definite Unit-Link 1413.

However, the action of the logical factor $Y^2_{Wi}$ becomes reversible, different from the previous two factors, which opposes to an axiom of the providence of existence. The left side of the expression (10) which can be grasped by the relation of differences between the Consciousness Unit-Link 1309's semantic quality 501a and the reversible action's semantic quality 501a corresponds to semantic quality of the awareness or cognition produced by 'Coupling' which humans as subject perform, that is, a meaning rj as a result of individual human's cognitions. Also, the right side of the expression (10) shall indicate a structure to grasp a meaning equivalent to it.

This is corresponded to the space duplication function **Tij**.

$$Wi - \Phi Y^2_{Wi} = rj \qquad rj = Tij\ (ri)$$

The i in the spatial simulation universally denotes a Deuteronomic order of Consciousness Unit-Link 1309's Logical Atom and the j universally denotes a Deuteronomic order of the Equivalent Logical Atom of the Natural Unit-Link rj 2421 identifying a meaning of Consciousness Unit-Link 1309's semantic quality rj, so if the self-evident ij is left out and expressed simply by $T_U{}^1$, the expression (10) can be rewritten as follows. That is,

$$T_U{}^1 = \Phi (L^2_{Wi} + (L^3_{Wi} + Y^3_{Wi}) + (L^4_{Wi} + Y^4_{Wi})) \quad (11)$$

In the Natural meaning-space 701, humans shall never be aware of the self or the truth of cognition. For example, we also rephrase it as the depths of consciousness. The expression (11) becomes a relational expression of a static set expressing the depths of consciousness. This is called 'Scenario Function'.

When W (corresponding to the number of media to which words belong) pieces of data factor exist as elements of a set to establish a meaning-space the number of Logical factors is also W, and the Scenario Function can be rewritten as follows. That is,

$$T_U{}^1 = \Phi (\Sigma_W L^2_{Wi} + \Sigma_W (L^3_{Wi} + Y^3_{Wi}) + \Sigma_W (L^4_{Wi} + Y^4_{Wi})) \quad (12)$$

When k pieces of the set to establish a meaning-space exist, the Scenario Function can be rewritten as follows. That is,

$$T_U{}^1 = \Phi\ (\Sigma k \Sigma_W L^2{}_{Wi} + \Sigma k \Sigma_W\ (L^3{}_{Wi} + Y^3{}_{Wi}) + \Sigma k \Sigma_W\ (L^4{}_{Wi} + Y^4{}_{Wi})) \quad (13)$$

Also, if a dependent relation occurs among the k pieces of sets, the n the Scenario Function can be rewritten as follows. That is,

$$T_U{}^1 = \Phi\ (\Sigma k \Sigma_W L^2{}_{Wi} + \Sigma k \Sigma_W\ (L^3{}_{Wi} + Y^3{}_{Wi}) + \Sigma k \Sigma_W\ (L^4{}_{Wi} + Y^4{}_{Wi})) \quad (14)$$

Herein, the $\Sigma_W$ is a symbol to represent collecting W pieces belonging to inside the set identified by k, so it is expressed by W. That is,

$$\Sigma_W \equiv W$$

$$\Sigma_W L^2{}_{Wi} \equiv W02k$$

$$\Sigma_W\ (L^4{}_{Wi} + Y^4{}_{Wi}) \equiv W04k$$

$$\Sigma k \Sigma_W\ (L^3{}_{Wi} + Y^3{}_{Wi}) \equiv W03$$

The expression (14) can be expressed as follows.
That is,

$$T_U{}^1 = \Phi\ (\Sigma kW02k + W03d + \Sigma kW04k) \quad (15)$$

or,

$$T_U{}^1 = \Phi\ (+\ \Sigma k\Phi 2\ (L^2{}_{wi})$$
$$+\ \Phi 3\ (L^3{}_{Wi} + Y^3{}_{Wi})$$
$$+\ \Sigma k\Phi 4\ (L^4{}_{Wi} + Y^4{}_{Wi}) \quad (16)$$

If Wi of expression (16) is simplified and transcribed as by W,

$$T_U{}^1 = \Phi\ (+\ \Sigma k\Phi 2\ (L^2{}_{w})$$
$$+\ \Phi 3\ (Y^3{}_W + L^3{}_W)$$
$$+\ \Sigma k\Phi 4\ (Y^4{}_{Wi} + L^4{}_W) \quad (17)$$

This function is called a 'Scenario Function'.
For convenience, the expression (17) is described as by the following expression.

$$T0 = \Phi 0\ (+\ \{\Phi p\ \{\qquad , L2(k, i)\}\ \}k$$
$$+\ \Phi p\{Y3(k, i)\ , L3(k, i)\}$$
$$+\ \{\Phi p\ \{Y4(k, i)\ , L4(k, i)\}\}\ k\ ) \quad (18)$$

Fig. 24 is a conceptual diagram for explaining the relationship between the Scenario Function and the spatial simulation.

In this Scenario Function,

VIII. The Φ0 (+ + +) means a logical structure of the Idea Rule that establishes divergent structure and convergent structure.
This is called 'Pallet Chain Function'.
The '(' is a symbol which represents a seating onto a Sitting Locus due to the Deuteronomy and corresponds to a function of receiving screen data in case of information system.
The ')' is a symbol which represents the formation of Natural Unit-Link due to Unitization and corresponds to a function of sending screen data in case of information system.
The '+' is a symbol which represents the vector synthesis and corresponds to a function of activating each pallet in case of information system.
IX. The Φ0 ( + ) means a logical structure of the convergent rule and divergent rule

to establish Event meaning-space 707 and Equivalent meaning-space 709. This is called 'Pallet Function'. The '( + )' means a functionality of assembling elements within the ( ) and corresponds to a function of activating elements within the ( ) in case of information system.

X. The L2(k, i) means a logical structure of Definite meaning-space 705 producing Definite Unit-Link 1413 which grasps a slice of the Consciousness Unit-Link 1309 viewed from Definite meaning-space 705. This is called 'W02 Homogeneity Vector'. The inside of ( ) are variables.
XI. The Y3(k, i) is a logical structure of Revelation 1415 and Acceptance 1416, and means duplicating a slice of Consciousness Unit-Link 1309 grasped by Definite Unit-Link 1413 onto Event meaning-space 707. This is called 'W03 Duplication Vector'. The inside of ( ) are variables.
XII. The L3(k, i) means a logical structure of Event meaning-space 707 to produce Event Unit-Link 1417 which grasps a slice of Consciousness Unit-Link 1309 viewed from Event meaning-space 707. This is called 'W03 Homogeneity Vector'. The inside of ( ) are variables.
XIII. The Y4(k, i) is a logical structure of Breakup and Regulation and duplicates a slice of Consciousness Unit-Link grasped by Definite Unit-Link 1413 together with a slice of Consciousness Unit-Link 1309 grasped by Event Unit-Link 1417 onto Equivalent meaning-space 709. This is called 'W04 Duplication vVctor'.
XIV. The L4(k, i) means a logical structure of Equivalent meaning-space 709 to produce Equivalent Unit-Link 1419 which grasps a slice of Consciousness Unit-Link 1309 viewed from Equivalent meaning-space 709. This is called 'W04 Homogeneity Vector'. The inside of ( ) are variables.
XV. The independent variable i is an identifier which identifies both a Consciousness Unit-Link 1309 that takes a Logical Atom assuming the Deuteronomic order i as an Equivalent Logical Atom and its semantic quality 501a, and it is an identifier which has regarded the identifier j of the word that identifies existence phenomenon that semantic quality 501a embodied into the Natural meaning-space 701, as equivalent to what is possessed by the Equivalent Logical Atom corresponding to Consciousness Unit-Link 1309.
That is, it is as follows:

$$i = j.$$

XVI. The independent variable k is an identifier which identifies the 'field of time and space', where semantic exists.
A Scenario Function which is a solution solved based on the above solution method denote a relationship as shown by Fig. 24.

4.2.4 Reduction

Next, an explanation is made concerning the Reduction onto the computer's space.

At the stage of the aforementioned Scenario Function, it is still nothing but grasping the structure of giving a meaning that can univocally (hereinafter, it is synonymous with 'a true state as a proposition') determine software requirement and its program without an entry of arbitrariness. This invention is what goes back to the root of this meaning-giving action that is a means of recognizing a certain existence phenomenon as different from the other existence phenomenon and has established algorithm for the process in which the univocal semantic quality 501a of a word existent in a theoretical space latent with the origin, that is, the Consciousness meaning-space 703, emerges irreversibly into Natural meaning-space 701 and it is recognized by humans to become the existence phenomenon.

In the process leading to this stage, a process from Definite Unit-Link to Equivalent Unit-Link 1419 is a state of semantic quality 501a being until the development-requiring party's development requirement is embodied as an existence phenomenon of an expression composed of words, and the Coupling of the semantic quality 501a is to be uttered with an expression composed of words as a development requirement of the development requiring party. Software is nothing but a algorithm made into procedures with programming languages, whereas the algorithm is about the process beginning from the origin of semantic quality possessed by words until they are uttered as a development requirement up to their embodiment as words. Accordingly, it actually means that what we need tp do is to embody the semantic quality 501a as data code into the data field belonging to the Screen, which consists information processing system, and the Media, which is an existence with a mass such as Printouts et al, enabling humans to recognize it and to give a meaning to it. That is, it will do if it is devised so as to be able to imitate the algorithm of the providence of existence into the space of the computer. This is called 'Reduction'.

Fig. 25 is a conceptual diagram for explaining this Reduction into the space of the computer.

As shown in this diagram, the Reduction can be corresponded as follows:

XVII. Upon this Reduction into the space of the computer, in that the space is a mass existence, as well as in that the *to-be Reduced-subject* semantic quality 501a is not a mass existence, it is necessary to convert the *to-be-Reduced-subject* into a mass existence data code, thereby making it actualized.

- First, as to the embodying destination, since semantic quality 501a assumed by Unit-Link has been embodied as a speech and action of a language composed of words consisting development requirement, a computer space which simulates utterance of a word shall be corresponding to a field on media like Screen, Printout, etc. that can be grasped by human sense as the smallest information to which a human bestows a meaning.
- Next, semantic quality during the process until being embodied as an existence phenomenon shall be a data code generated in a data field 405b on the main memory which is identified by the pallet division being a process identifier, the division of media to which words belong, and the words division.

Next, an explanation is made on a programs obtained as a result of the Reduction, by turns.

Fig. 26 is a flowchart for explaining a logical structure of the program called 'W02 Homogeneity Vector' (hereinafter, it is also called 'L2 (k, i)').

The L2 (k, i) is a logic of Definite Unit-Link 1413 which considers word (i) belonging to media (k) such as Screen that is an entity of existence uttered as a language composed of words consisting development requirement as an Equivalent Logical Atom and grasps a slice of semantic quality (that is, the attribute of existence of a space expanse of the divergent dense structure) of Consciousness Unit-Link 1309 in which the Kuh is established viewed from Definite meaning-space 705 where the Equivalent Logical Atom (that is, Boundary Logical Atom) is existent (that is, whether there is a condition of a chance to Associate the semantic quality with an Event Unit-Link, while by revealing into Consciousness Unit-Link 1309 where the Kuh is established).

However, at the point of Reduction, a word is existent because the condition was already satisfied and grasped, so a logic of L2 (k, i) shall implement a step 2601 checking whether data field 2600 of the word is prepared on main memory and whether it is not yet Associated, that is, data code is not existent.

Also, the word's being already existent means semantic quality corresponding to Consciousness Unit-Link 1309 where the Kuh is established has existed by Association. Thus, in the Reduction environment does there need to be the Consciousness Unit-Link and the logic which leads to its establishment. That is, data field of the word has been prepared on main memory, and in that data field exists data code which is to be grasped as semantic quality corresponding to Consciousness Unit-Link 1309 by being is input from outside of computer (step 2603) . Then an examination is done (step 2605) if satisfying a condition for being able to surely become the word's semantic quality (This condition is so-called type attribute in the computer space) (step 2605). In case this check is justified (step 2609), it is sufficient to set a message displaying that this logic itself has moved from refusal to acceptance (resetting (step 2611) of data field 2613 of the refusal flag).

The fact that logic mentioned above is a logic against one word leads to that, practically, L2 (k, i) needs to be prepared only for data input words requiring check on type attribute.

Explanation is made below the positioning of L2 (k, i).

XVIII. The 'existence phenomenon' embodied in the Natural meaning-space in the 'providence of existence' originates in semantic quality 501a assumed by Consciousness Unit-Link 1309 existing in the Consciousness meaning-space. Semantic quality 501a assumed by the Consciousness Unit-Link 1309is given a chance of embodiment by the Definite Unit-Link being established in the Definite meaning-space.

By the way, the Consciousness Unit-Link 1309 is a Unit-Link which in established in the Consciousness meaning-space. On the other hand, the Definite Unit-Link is a false Unit-Link which will be established in the Cognitive meaning-space. That is, their materializing meaning-spaces are each different, so a chance is not given simply by words of giving a chance. That is, there must be a theory inevitably requiring a condition enabling coordination between spaces. In this regard, the condition enabling the coordination between spaces is a concept of "the Kuh" and 'the Non-Kuh'. That is, a relationship between the 'Consciousness Unit-Link where 'the Kuh' is established and the 'Definite Unit-Link where 'the Non-Kuh' is established is a Unit-Link enabling coordination between the meaning-spaces.

<A meaning of Unit-Link>

An individual element is called 'Equivalent Logical Atom' and expressed as (Ej).
A set of finite pieces (m pieces) of Logical Atom (Ei) is expressed as ΣmEi and called 'dense set'.
A 'Unit-Link' is a concept that is expressed by the following expression. That is,

Mathematical expression of 'Unit-Link' : ΣmEi ≒ Ej

Here, the ≒ indicates that 'semantic space diameters' of the left and right sides are approximate (that is, equivalent).
Further to add, in case of 'divergent dense set', the Logical Atom, whose semantic space diameters smaller than the total sum of the semantic space diameters of Logical Atoms at odd-number positions, is selected as an Equivalent Logical Atom, when the Logical Atoms are placed in ascending order of the 'meaning vital force' of Consciousness Logical Atoms constituting the set.
On the other hand, in case of 'convergent dense set', the Logical Atom, whose semantic space diameter is larger than the total sum of the semantic space diameters of Logical Atoms at odd-number positions, is selected, when the Logical Atoms are placed in ascending order of the Cognitive Logical Atoms constituting the set.
Also, the semantic space diameter of ΣmEi is a total sum of the semantic space diameters of individual Logical Atoms at odd-number positions, and the each semantic space diameter is a reciprocal number of each of the corresponding positional vital forces.

<A meaning of the Kuh>

By the way, at the beginning of the logic concerned with the 'Homogeneity Vector' of the program (Tense Control Vector) that has reduced this logic onto a computer, a check asking *if 'Empty?'* is always implemented. A meaning of this 'Empty' state and checking if 'Empty?' based on a logic existing in the background of this invention is as follows.
This invention's proposition is to exclude arbitrariness from the cognition of semantic quality assumed by the word which is considered as the smallest unit that established a human cognitive action against the existence phenomenon in the 'Natural meaning-space', and a means of this invention for solving it equals solving the 'Scenario Function', and to solve it means to grasp the univocal semantic quality assumed by the word latent in the 'Consciousness meaning-space'.
When semantic quality assumed by this word's identifier is expressed by a concept of 'Unit-Link', the univocal semantic quality corresponds to the 'Consciousness Unit-Link where 'the Kuh' is established.

XIX. On the other hand, what will become a meaning which is not univocal but uncertain with the multiplicity of meaning is a set of Logical Atoms of the Cognitive meaning-space consisting the 'convergent structure'. This is because 'convergent structure makes it impossible to univocally recognize' Logical Atoms consisting the set. Such a state shall correspond to a meaning assumed by the word identifier in the Natural meaning-space.

XX. Now, in Unit-Link, there is a Unit-Link where 'the Kuh' is established and it is expressed by the following expression.

Mathematical expression of the Unit-Link where the Kuh is established : ΣEi ≒ Ej

Here, the 'Equivalent Logical Atom' Ej is a Logical Atom included in by the dense set ΣEi. That is, it represents a state of being able to cognize the self Ej and all the other Ei's sum ΣEi both as definitely and as univocally, in other words, it indicates a state that 'Elements are equal to the whole, and the whole is equal to elements'. Viewed from the providence of existence, , there can exist a unique case where 'Equivalent Logical Atom' of such a Unit-Link corresponds to the 'Boundary Logical Atom' possessing a semantic space diameter covering all Logical Atoms. What realizes the condition for enabling the intervention of divergent and convergent structures is, in fact, this case only. The LYEE's Scenario Function utilizes this unique condition. It is the Consciousness Unit-Link, in which this Kuh is established, that can avoid the Bertland Russell's 'irrationality'.
Now, the Consciousness Logical Atom is produced by a dense set composed of the (λ-1) power of 3 pieces of simple permutation (called 'divergent dense set' because of simple permutation) being constructed by an action of 'the existence law possessed by the Idea Rule.

On the other hand, the Cognitive Logical Atom is produced by a dense set composed of the (λ-1) power of 3 pieces of duplicate permutation (called 'convergent dense set' because of duplicate permutation and distinguished from the dense set composed of Consciousness Logical Atoms) is constructed by an action of 'the existence law possessed by the Idea Rule.

A relationship between the dense set ΣmEi and the Logical Atom possessing a semantic space diameter equivalent to the semantic space diameter possessed by the dense set ΣmEi is a 'Unit-Link', and in order to realize an equivalent relation, semantic space diameters of individual Logical Atoms must be univocally identified. Such a condition is satisfied in the dense set composed of all simple permutations in case of the 'Consciousness Logical Atom' constructing a dense set composed of simple permutation.

On the other hand, the Cognitive Logical Atom takes a duplicate permutation, so semantic space diameters of individual Logical ¥Atoms cannot be univocally identified. In order to enable the univocal identification of each Logical Atoms' semantic space diameter, among dense sets composed of duplicate permutation, semantic space diameters of Logical Atoms consisting the dense set must be placed in the order of the size of their semantic space diameters.

A convergent dense set rearranged on such a condition is called a 'secondary convergent dense set' and distinguished from the 'convergent dense set'. Further to add, the 'secondary convergent dense set' and the 'convergent dense set' shall possess a complementary relationship.

For example, by rearranging the duplicate permutation taking 3 pieces from the three Logical Atoms having the condition: a>b>c>, it becomes as follows:
aaa, aab, aac, abb, abc, ....,
a dense set composed of univocal semantic space diameters of individual Logical Atoms can be found for the first time at the fifth position.

A Rule established in this secondary convergent dense set is called 'the first Contingent Rule', and this operates so as to establish a Unit-Link by activating a Cognitive Rule established in the convergent dense set corresponding to this secondary convergent dense set. However, a Cognitive Logical Atom never exists which possesses a semantic space diameter larger than that of the convergent dense set composed of abc, thus a 'Unit-Link' taking Cognitive Logical Atom as Equivalent Logical Atom cannot be established. The only possible Unit-Link is a Unit-Link taking 'Boundary Logical Atom' as 'Equivalent Logical Atom. As aforementioned, a unique case can exist in which Consciousness Unit-Link taking this Boundary Logical Atom as Equivalent Logical Atom has been established.

Speaking above in brief, it becomes an action to give a chance to embody an existence event by 'Revealing' into the Consciousness Unit-Link 1309 in which 'the Kuh' is established by means of the Cognitive Rule activated by the 'first Contingent Rule' and the Definite Unit-Link established by the activated Cognitive Rule. In the providence of existence, 'The direction of vectors is from Definite meaning-space to Consciousness meaning-space', whereas in a space type, 'The director of vectors is from Consciousness meaning-space to Definite meaning-space', which are reverse to each other. What the vector means in a 'space type' is expressed as grasping a slice of the Consciousness Unit-Link 1309's semantic quality 501a from the Definite Unit-Link.

Above-mentioned clarified the positioning of L2 (k, i).

Fig. 27 is a flowchart for explaining a logical structure of program called 'W03 Duplication Vector' (also called 'Y3 (k, i)' hereinafter), which is a part of results of the Reduction.

The Y3 (k, i) has a logic to duplicate a slice of Consciousness Unit-Link 1309 grasped by Definite Unit-Link 1413 into Event meaning-space 707, and it is a logic leading from the Revelation 1415 of the providence of existence to Association. That is, upon Reduction, Y3 (k, i) is prepared in W03 pallet only for the word needing a type attribute check, that is, the word whose objective is to input data. For this background, a pallet which words having an objective to input data belong to is called W02G.

In the Y3 (k, i), it represents a logic both to examine (step 2701) to see if data code with which a type attribute checking has been justified is existent in the word's data field which simulates Definite meaning-space and to, if the code exists there into the word's data field 2700 (step 2605) which simulates Event meaning-space so as to realize it as a semantic quality of Consciousness meaning-space.

Fig. 28 is a flowchart for explaining a logical structure of program called 'W03 Homogeneity Vector' (also called 'L3 (k, i)' hereinafter), which is a part of results of the Reduction.

The L3 (k, i) has a logic of the Event Unit-Link 1413 to consider as Equivalent Logical Atom both the words (i) belonging to media (k), including Screen being an entity of existence uttered in language composed of words constituting development requirement and the words (i) belonging to File, etc. (d), in case the Reduction destinations of the Consciousness meaning-space are corresponded to magnetic recording media other than main memory, as well as to grasp a slice (that is semantic quality, of Consciousness Unit-Link 1309's in which 'the Kuh' is established.) of the semantic quality (that is, an attribute of existence of an expanse of the divergent dense structure) of the Consciousness Unit-Link 1309 in which 'the Kuh' is established viewed from the Event meaning-space 707 where the Equivalent Logical Atom (that is, Boundary Logical Atom) exists. Then, , it mounts the following in accordance with the nature of words:

Data input words belonging to media (k) like Screen, etc. are to be mounted onto W02G pallet as LG3 (k, i),
Data output words belonging to media (k) like Screen, etc. are to be mounted onto W04P, either as LY3 (k, i) in case of data input/output words or as LP3 (k, I) in case of data output words,
and words (called a Boundary Word) positioned at the boundary of T0 and T1 are mounted onto W04P as LR3 (b, i).

Further to add, the LY3 (k, i) can be also called as 'Duplication Vector type Homogeneity Vector', in particular.

Also, the LR3 (b, i) called as 'R-type Duplication Vector', in particular.

In the logic of these Unit-Links, a condition must always exist for associating and establishing semantic quality of the 'Consciousness Unit-Link where the Kuh is established'. However, at the point of Reduction a word is actually existent because it has been grasped by satisfying the condition, thus the L3 (k, i) logic shall implement an examining (step 2802) whether the data field 2700 of the word has been prepared on main memory but not been associated yet, that is, data code is not existent there.

When data code is not existent (step 2801), it then attempts to produce semantic quality of the self word (step 2803) by taking the semantic quality associated from a 'Consciousness Unit-Link where the Kuh is established' as a data code. Although, the Equivalent Logical Atom of Event Unit-Link is a Cognitive Logical Atom and must be the same as an Equivalent Logical Atom of Definite Unit-Link, it happens to turn out to be smaller erroneously. In such a case, the Event Unit-Link must not be established, and its Equivalent Logical Atom will autonomously 'recur' as a Consciousness Logical Atom. Such a checking of errors corresponds to work requirement.

To simulate such a logic, L3 (k, i) generates self-word semantic quality on a data field 2800 of the work area (step 2803), and when the semantic quality has been induced to that area (step 2805), examines the justification of the data code (step 2807).

If justified by checking, there needs to be logic in which L3 (k, I) sets the data code produced in the work area's data field 2800 into a data field 2700 of the word that imitates Event meaning-space (step 2811), as the original word's semantic quality. In addition, it is sufficient to set an indication that this logic itself moved from refusal to acceptance (i.e., reset of data field 2814 of Refusal Flag (step 2813) and reset of data field 2816 of Restart Flag (step 2815)).

Fig. 29 is a flowchart for explaining a logical structure of a program called 'W04 Duplication Vector' (also called 'Y4 (k, i)' hereinafter), which is a part of results of the Reduction.

As shown by this diagram, the Y4 (k, i) performs a role to produce Equivalent Unit-Link 1419 by the Event Unit-Link 1417's breakup in the providence of existence. In the space type, it has a logic to duplication semantic quality 501a of Consciousness Unit-Link 1309 grasped from Definite Unit-Link 1413 as Equivalent Logical Atom of the Equivalent Unit-Link upon of grasping it as semantic quality 501a of Consciousness Unit-Link 1309 viewed from Equivalent Unit-Link, or a logic to duplicate semantic quality 501a of Consciousness Unit-Link 1309 grasped from Event Unit-Link 1417 as Equivalent Logical Atom of Equivalent Unit-Link viewed from Equivalent Unit-Link 1419. That is, upon Reduction, Y4 (k, i) is placed in W04 pallet only for a semantic quality to be embodied in Natural meaning-space, that is, for words to be output via media such as a Screen.

Y4 (k, i) examines (step 2901) whether data code which passed through the type attribute check exists or not in the data field 2600 of the word which simulates Definite meaning-space and, if it exists, duplicates it (step 2903) into the data field 2900 of the word to copy which imitates Equivalent meaning-space so that it can actualize a semantic quality of Equivalent meaning-space.

Next, the logic has it that when data code which passed through the type attribute check does not exist in the data field 2600 of the word imitating Definite meaning-space, it is examined whether data code corresponding to the self word's semantic quality exists or not in the data field 2700 of the word imitating Event meaning-space (step 2905) and, if it exists, it duplicates the data code (step 2907) into the data field 2900 of the word imitating Equivalent meaning-space so that it may actualize as semantic quality of Equivalent meaning-space.

Fig. 30 is a flowchart for explaining a logical structure of a program called 'W04 Homogeneity Vector' (also called 'L4 (k, i)' hereinafter), which is a part of results of the Reduction.

As shown by this diagram, the L4 (k, i) corresponds to Equivalent Unit-Link 1419 formed by the Cognitive Rule which was activated by the fourth and fifth Contingent Rules in the providence of existence. The Equivalent Unit-Link is a logic to perform an action to Regulate a breakup of semantic quality 501a grasped by Event Unit-Link 1417 that was Associated from Consciousness Unit-Link 1309 in which the Kuh is established and, in a space type, to grasp a slice of semantic quality 501a of Consciousness Unit-Link 1309 from Equivalent Unit-Link 1419.

In these Equivalent Unit-Links' logic, there must always be a condition that the Event Unit-Link established by Associating the semantic of the 'Consciousness Unit-Link in which the Kuh is established has broken up and been Regulated. At the point of Reduction, however, since the condition has already been satisfied to be grasped and a word has been existent, the L4 (k, i) logic shall examine (step 3001) whether the word's data field 2900 has been prepared on a main memory and a data code has already been existent or not.

Next, L4 (k, i) tries that the semantic quality broken up from Definite Unit-Link or Event Unit-Link be edited (step 3003) as a data code, so as to make visible, the self word's proper semantic quality that was an invisible existence.

For example, such as putting "," to every three digits (thousand) or "¥" to the heading of numerals.

However, in the computer space for Reduction, in which the main body operating a computer is a human who is apt to make mistakes, and not the providence of existence, so data codes produced therein might be what cannot be edited in to a visible existence. For this reason, an examination is implemented whether the edit was successful or not after the editing process into the visible existence. Also, it is inappropriate to edit such an erroneous data and to make it visible existence as it is, so the edited data is generated in the work area, and, if editing was successful, the data code edited in the work area is set as semantic quality of the original word, while, if the editing was not successful, the cause for the failure can be limited to the refusal of Definite Unit-Link or Event Unit-Link, such a logic will be required as implements an examination on the refusal flag setting status (step 3005, step 3007) as well as determines an existence of the refusal state, that is, error message (step 3009, step 3011).

Among results of the Reduction explained so far, the Homogeneity Vector and Duplication Vector of every pallet are generally called 'Tense Control Vector' of the pallet (however, for W02 pallet, Homogeneity Vector only).

Now, in the expression (16), the Φp (k, 2) {( ), ( ), ( )}k, Φp(d, 3) {( ), (), ()} and Φp (k, 4 {(), (), ( )}k are called 'Pallet Function', and they are functional expressions of logical structure of Convergent Rule and Contingent Rule of the providence of existence. Results of their Reduction are exactly a program itself composed of a series of codes.

In this Pallet Function, subscript k represents independent variable of the screen identifier, and subscript d represents independent variable of the identifier by taking all media as its object. Also, subscripts '2', '3' and '4' have a meaning of the order of the establishment of meaning space, while respectively corresponding to as follows:

2: 'Definite meaning-space'
3: 'Event meaning-space'
4: 'Equivalent meaning-space'.

The '{ }' means an action to collect each elements inside the '{ }', which corresponds to a logical set in which the Convergent Rule produces a convergent dense set 1401 and its complementary set secondary convergent dense set 1405. Each of what have been collected is called as follows:

The Φp (k, 2) { } is W02 Pallet of Screen with identifier k,
The Φp (d, 3) { } is W03 Pallet collecting all definitives of the system,
The Φp (k, 4) { } is W04 of Screen with identifier k.

Fig. 31 is a flowchart for explaining the logical structure of Pallet Function.

The drawing is only presented herein, and an explanation on every step will be made later.

Now, the Φ0 ( + + + ) in expression (18) is an action of the providence of existence from a spatial simulation point of view, that is, a functional expression of a logical set of the Idea Rule which embodies existence phenomenon by establishing Definite meaning-space 705, Event meaning-space 707, and Equivalent meaning-space 709 in this order and implementing space duplication of semantic quality 501a assumed by Consciousness Unit-Link 1309. The result of this Reduction is exactly a program itself composed of a series of codes. This is called 'Pallet Chain Function'.

In the expression of the Pallet Chain Function, the '+' means that the space duplication is expressed as a vector synthesis in the spatial simulation and it is a symbol which expresses an action to activate the elements within '( )', that is, programs being of pallets by turns.

Fig. 32 is a flowchart for explaining the logical structure of the Pallet Chain Function.

The drawing is only presented herein, and an explanation on every step will be made later.

What the aforementioned Scenario Function was converted into in the form of diagram is a software requirement definition called 'Homogeneity Map', which is a subject of the present invention and on this *Homogeneity Map* pallets are connected with each other with a line. Details of the *Homogeneity Map* are explained later.

Now, through the conversion of the aforementioned 'Reduction', the following new element is derived which did not exist in the previous Scenario Function, and a logical structure to correct and modify it shall be required.

The semantic quality 501a corresponding to Consciousness Unit-Link 1309 established in the Consciousness meaning-space 703 can be identified by the Equivalent Logical Atom's Deuteronomic order. And, its Reduction destination shall be main memory. The medium of this main memory, however, is valid only at the state of the power supply being fed, and the already-existing semantic quality 501a will disappear at the state of the power supply being cut. On the other hand, according to the providence of existence, the Logical Atom is an eternal existence. Therefore, the semantic quality 501a of Consciousness Unit-Link 1309 taking the Logical Atom as its element is also an eternal existence.

Thereupon, in the information processing system, a countermeasure is normally taken by storing semantic quality 501a onto File being magnetic recording media, making the semantic quality exist on its main memory, in order to guarantee the eternity. Then, there needs to be the logic in which the semantic quality is restored from File of this magnetic recording media onto its main memory or that it is memorized from the main memory onto File of the magnetic recording media, that is, an action to implement data reference in File, data registration into File and of data modification on File, as a modification logical structure.

A program equipped with a logical structure implementing this action is called 'Command Action Vector', and it is designated as Scenario Function T1 as having both an action against the media storing such a File and a structure to handle semantic quality of words on the media, and it is discriminated from Scenario Function T0. As a result, Scenario Function T0 is rewritten as follows:

$$T0 = \Phi 0 (+ \{\Phi p \{ \quad , L2(k, i), P2(j)\} \}k$$

$$+ \Phi p \{ Y3(k, i) , L3(k, i) , P3(j), T1(f)\}$$

$$+ \{ \Phi p \{Y4(k, i) , L4(k, i) , P4(j)\}\} k)) \qquad (17)$$

Hereupon, the 'T0' is a Scenario Function which takes Screen medium identified by the definitive identifier k as a base definitive.

The 'T1 (f) is a Scenario Function which takes File medium or Printouts medium identified by the definitive identifier f as a base objective definitives as well as takes File medium identified by the definitive identifier r' as a reference definitives. The Pallet Chain Function in this instance is Φ1. That is, it is expressed as follows:

$$T1 (f) = \Phi 1 (\{\Phi p(rf, 2)\{ \quad , L2 (r, i), P2 (r, j), P2 \{j)\}\} r$$

$$+ \Phi p (rf, 3) \{Y3 (r, i), L3 (r, i), L3 (f, i), P3 (j)\}$$

$$+ \{\Phi p (fr, 4) \{Y3 (f, i), L4 (f, j), P4 (f, j), P4 (j)\}\} f)$$

and,

The P2 (r, j) is a Command Action Vector in charge of data reference in File and File open/close,

The P4 (f, j) is a Command Action Vector in charge of data registration or update into File as well as File open/close. The Pn (j) is explained later.

Fig. 33 is a flowchart for explaining a logical structure of the Command Action Vector. Even is a Command Action Vector, is a logic to handle word's semantic quality, so its logical structure is realized as the same logical structure as the Homogeneity Vector.

- First, the P2 (r, j) has a program identifier which identifies the start position of a program of the Command Action Vector. The Command Action Vector program is to be created for every File identified by identifier r or f, and for every kind of the Command Action (open, reference, registration, modification or close). An identifier which identifies this creation unit is called 'Action Operator'. For example, if a Command Action Vector is expressed in COBOL, that handles data reference (kinds of Command = READ) on File whose file name is an inventory file and whose identifier is GOODSTCD, it goes as follows:
  P3-GOODSTCD-READ-SEC-SECTION.
  P3-GOODSTCD-READ-SEC-START.
- Next, the Execute (step 3301) has a logic to examine on the execute condition of an action of the Command issuance against the the File. This condition involved, for example, in case of an action to issue reference command, becomes a logic to examine whether that data code already exists in the data field of the main memory corresponding to words to be objects of the index belonging to the File, whether the program has not been executed, and whether the process of the last record of the File has not been finished.
- Next, the Execute process (step 3303) has a logic to issue a Command (open, reference, registration, modification or close) assigned to the program.
- Next, the Acceptance (step 3305) has a logic to examine on the result of executing the Command issued during the Execute process.
- Next, the Acceptance process (step 3307) has a logic in a case when the result of the examination during the Acceptance (step 3305) is true (justified), and this logic is, for example, in case of an action to issued reference Command, corresponding to the execution completed flag setting of the program, the clearance of the program's Refusal flag and the data setting into the data field on the main memory corresponding to words belonging to the File.

Above are explanations on the Command Actor Vector.

Next, an explanation is made on the Action Vector Pn (j). The Regulation in the providence of existence produces new Unit-Link in the number of pieces in power of the number of Logical Atoms consisting of the Event Unit-Link 1417. The Unit-Link is an Equivalent Unit-Link 1419. Equivalent Logical Atoms corresponding to the Equivalent Unit-Link 1419 inherits Equivalent Logical Atoms corresponding to the Event Unit-Link 1417. In reality, however, the number of Logical Atoms consisting of the Event Unit-Link 1417 cannot be specified because the Event meanings-pace 707 cannot be seen from the Natural meaning-space 701. Thereupon, upon Reduction, it is necessary to have a logical structure derived which handles a Regulating condition to produce a Unit-Link in that number and in the number of power of that number. A program to actualize this logical structure is called 'Work Action Vector'. Also, a Command Vector which is equipped with a logical structure to implement an action of the limiting Regulation is called 'Routing Action Vector'.

By the way, in the providence of existence, the disintegration of the Unit-Link happens to occur due to the Deuteronomy of new Logical Atoms and the disintegration of semantic quality as well. On the other hand, the Reduction of semantic quality is based on the 'data field on the memory', so it is necessary to have a logical structure in charge of this disintegration, action, derived.

This action does initialization of data field on the memory and setting of the condition to produce Unit-Links, and a program equipped with a logical set implementing this action is called 'Structural Action Vector'.

Fig. 34 is a flowchart for explaining a logical structure of the 'Routing Action Vector'. Even a Routing Action Vector is a logic to handle word's semantic quality, so its logical structure is realized as the same logical structure as the Homogeneity Vector.

Herein, the flowchart is only shown, and an explanation on every step of the process will be referred to later.

Fig. 35 is a flowchart for explaining a logical structure of the Work Action Vector. Even a Work Action Vector is a logic to handle word's semantic quality, so its logical structure is realized as the same logical structure as the Homogeneity ) Vector. Further to add, when the role of the Work Action Vector is handed over to the 'justification process' (step 2807) of W03 Homogeneity Vector it is unnecessary to prepare Work Action Vector on the system.

Herein, the flowchart is only presented, and an explanation an every step of the process will be referred to later.

[Differences between Scenario Function T1 and Scenario Function T0 and their mutual relation]

Software is a scheme controlled by computer by means of information which is an object of cognition that satisfies a 'meaning', when there is a limitation to the people and their behavior who utilize the objective software, the 'meaning' being recognized/perceived by humans included in the limited range among the meaning as a result of the cognition/awareness of natural and social phenomena by humans (The 'meaning' herein referred to a state of cognition/awareness in the depths occurring just before the embodiment as words and actions, that is, speech and behavior. In this sense, this invention grasps 'the meaning as an invisible existence'.).

Therefore, there shall be a premise in which information, as an object of cognition, must be existent on media such as Screen and Printouts that can be recognized visually and directly by humans.

As long as a human is a living body, a meaning which is a result of cognition/awareness of information being an object of recognition is always followed by the embodiment of speech and behavior, and the speech and behavior will become information as an object of newer cognition. Therefore, the scheme of cognition/awareness to induce a meaning that is a root of inducing human speech and behavior itself can be said to be a software.

By using Fig. 98, it is explained as follows:

Fig. 98 is a conceptual diagram for explaining the scheme of cognition/awareness to induce a meaning, by corresponding to a concept of Pallet.

That is, in this drawing, a chance of activating the scheme of cognition/awareness to induce a meaning is an appearance of information which is an object of cognition (in case of software, it is W04: 9801 or human speech and behavior), and because of this a scheme of cognition/awareness starts to operate (human perception: 9803).

Next, in succession to the cognition/awareness (human cognition/awareness: 9805) and the speech and behavior (human behavior: 9807) of a meaning resulted from the operation of a scheme of cognition/awareness, the scheme of cognition/awareness newly starts to operate (in case of a software, it is W02: 9809 or human: 9809).

Further, it leads to the cognition/awareness (in case of a software, it is W03: 9811 or human: 9811). This cycle repeats continuously.

The Scenario Function T0 is exactly a scheme of cognition/awareness to induce a meaning in a case of taking a human perception and speech and behavior as a base of activating cognition/awareness for inducing a meaning, and it is a function to determine software upon producing a software there from. That is, in case of an information processing system, as human perception and behavior takes medium of a Screen as an object, it is called 'Scenario Function T0' in this instance.

On the other hand, in human's case, the scheme (9811) of cognition/awareness which was activated on an occasion of perception and behavior by human is regarded as a system in which a cognitive action is working based on memorized information which was electively perceived out of already memorized information at the time of perception. That is, the scheme (9811) of cognition/awareness for inducing a meaning is also regarded as an action of '9801→9809→8911' which is rooted in the memorized information that was perceived at that time.

A scheme of cognition/awareness to induce a meaning, the scheme composed of the action of '9801→9809→8911' based on this memorized information, is called 'Scenario Function T1'. That is, Scenario Function T0 takes a premise that is '9801→9803→9805→9807→9809→9811' by taking a root in human perception and behavior, while Scenario Function T1 does not take a root in human perception and behavior but targets at the memorized information perceived at that point, that is in case of an information processing system, a software that '9801→9809→9811' system is underlying based on an information memorizing medium File.

Fig. 99 is a conceptual diagram for conceptually explaining the relation between T0 and T1 explained above.

As shown by the diagram and by Fig. 100 as well, Scenario Function T1 is what has conceived W03 pallet in Scenario Function T0 as a new synchronous structure.

According to the providence of existence of this invention, there is an Incomprehensible meaning-space 713 as a root of causing the embodiment of existence phenomenon, and Primitive Logical Atoms latent infinitely in the space are autonomously duplicated intending to be an existence and they produce, by the Idea Rule, the divergent structure and the convergent structure as its complementary set.

In the divergent structure, a Divergent Rule is established by the rule of existence, and due to the Divergent Rule, Divergent dense set 1301 and secondary divergent dense set 1302 as its complementary set are produced. In the divergent dense set, a Consciousness Rule is established. Also, a Volition Rule which intends the inducement of Consciousness Unit-Link by the Consciousness Rule is established in the secondary divergent dense set 1302. By the Volition Rule, Consciousness Unit-Links are established all at once. A semantic quality assumed by this Consciousness Unit-Link becomes an origin of all existence phenomena.

On the other hand, also in the convergent structure, a Convergent Rule is established due to a law of existence, and by the Convergent Rule, convergent dense set 1401 and secondary convergent dense set 1405 as its complementary set are produced. A Cognition Rule is established in the convergent dense set 1401. Also, a Contingent Rule intending to materialize the inducement of Definite Unit-Link by the Cognition Rule is produced in the secondary convergent dense set 1405. The following are inevitably implemented caused by Definite Unit-Link 1413 established by the Contingent Rule: a Revelation 1415 to Consciousness Unit-Link, an Association 1416 from the Consciousness Unit-Link, an establishment of Event Unit-Link 1417 by the Association 1416, a Regulation from the Event Unit-Link 1417, an establishment of Equivalent Unit-Link 1419 by Regulation, a Coupling of the Equivalent Unit-Link 1419, and an establishment of Natural Unit-Link 1421 by the Unitization of Coupling. This Natural Unit-Link 1421 is exactly an existence phenomenon which is the embodiment of semantic quality assumed by the Consciousness Unit-Link. The theory mentioned above was a background principle that underlies this invention, as already mentioned.

Hereupon, the Idea Rule assumes the following roles: the activation of W02 pallet which simulates establishment of Definite Unit-Link 705 in correspondence with Pallet Chain Function, the activation of W03 pallet which simulates establishment of Event meaning-space 707' and the activation of W04 pallet which simulates establishment of Equivalent meaning-space 709.

The Convergent Rule and the Contingent Rule correspond to Pallet Function, whereas the Convergent Rule assumes the role of grouping Tense Control Vectors which simulate establishment of convergent dense set 1401. Further, since the convergent dense set 1401 is a set of Logical Atoms composed of a duplicate permutation, a Unit-Link cannot be induced into a set composed of overlapped Logical Atoms. Thus in order to perform harmonization with the providence of existence by the inducement of Unit-Link, the Pallet Function also assumes roles of autonomous examination on the possibility of the production of a Contingent Rule into the secondary convergent dense set 1405 in which Cognitive Logical Atoms are arranged in the descending order of their semantic space diameters and of an action to activate and reactivate the Cognitive Rule by the Contingent Rule produced therein.

Now, a purpose in building up an information processing system is found in obtaining results by operating the system. The origin of the operation is always accompanied by an operation of issuing a command by humans, in principle. Also, to continue the operation thereafter, human operation is always implemented at each important point. What command a computer to operate the information processing system as prescribed, while processing such nature, are a series of codes, which are so-called a program. A process sequence in such a program by the traditional methods is generally as follows: Input process, followed by, conversion process and output process as last. That is, it is a way of thinking that, taking an operation of human input as the start, the operation of system is started and continued.

In this invention, however operation of such a human input is regarded as a phenomenon of existence phenomenon, and the origin of the existence phenomenon is nothing but semantic quality of Consciousness Unit-Link, and it is regarded as having embodied into the Natural meaning-space 701 of a human by the action of the providence of existence. This leads to that, also in the information processing system which is the providence of existence reduced into the computer space, semantic quality of the existence phenomenon of the input operation must already exist latently as a Reduction of Consciousness Unit-Link. This relation is what is meant by the Scenario Function, that is,

$$Wi\text{-}\Phi Y^2_{wi}=\Phi\ (L^2_{wi}\ \ +(L^3_{wi}\ \ + Y^3_{wi})+(L^4_{wi}\ \ + Y^4_{wi})) \quad (10)$$

That is, a phenomenon of human input operation is conceived as an expression of will intending to adjust itself to the semantic quality already latently existent by the Reduction into a computer space (This invention calls this 'adjustment as 'Homogenesis.).

4.2.5 The verification of the functionality of the program structure based on this invention

The feature of the processing method of software based on this invention is found on the point that it implements synchronous process. The synchronous process is meant to be based on the principle logical structure unique to this invention which enables the following: Data codes of self words can be created only by data coupling as if programs of respective word identifiers 401 mutually adjust consistency (that is, by the autonomous judgment regardless of the relationship of processing sequence), and, as a result, the intent, which is an existence invisible to development requiring parties who issued the words, can be satisfied as a tacit understanding as a development requirement 400. Speaking rhetorically, this logical structure is nothing but a scheme of our consciousness itself. The functionality of the program structure based on the present invention possessing such features is verified as follows by using an example.

For example, explained herein is an example of data processing by using a Screen shown in Fig. 157.

The Screen 15701 in Fig. 157 is a screen to implement data entry concerned with products ordered.

In this screen, the following words are pasted so as to attain the purpose of data entry concerned with the ordered products.

- Customer 15703
- Product 15703
- Price 15707
- Quantity 15709
- Amount 15711
- Sales 15713

Also, File 15715 in Fig. 157 is a file with a name Product List File attached which supports an entry of the ordered products data.

In this file, the following words are pasted so as to attain the purpose of entry support for the data of ordered products.

- Product 15717
- Price 15719

Also, File 15721 in Fig. 157 is a file with a name Order Data Management File attached which memorizes ordered products data that has been entered from the screen.

In this file, the following words are pasted so as to attain the purpose of order data management.

- Customer 15723
- Product 15725
- Sales 15727

Also, as to the contents to be processed in Fig. 157, first, into the data field corresponding to words on the screen 15701, the following data fields are to be entered, as data concerned with the ordered products: Data field corresponding to the title word 'Customer' (hereinafter simply called 'Customer' data field. Other data fields to follow are also called in the same manner.), 'Product' data field 15705 and 'Quantity' data field 15709, and the Enter key is pressed so as to implement entry process.

Next, upon pressing the Enter key, the program operates and in order to obtain Price 15719 corresponding to Product 15705, which is necessary to calculate Amount 15711, Sales 15713 and 15727, the Product List File is searched (15729) by using the input Product 15705 as a key, and Price 15719 of Product 15705 and of 15717 are obtained (15731, 15735).

Quality 15709 inputted from the screen are to be taken (15733), then Amount 15711 are to be obtained by multiplying the Quantity 15709 and Price 15719 corresponding to the Product 15705 obtained (15735). The Amount obtained is set into the Amount 15711 of the screen output area (15738).

Next, the calculation-result Amount 15711 is examined. If it equal for above ¥10,000, Sales is multiplied by 0.8, unless multiplied by 0.9 to obtain real Sales. (15740).

Next, Customer 15703, Product 15709 and the calculated Sales 15740 are to be registered in the Order Data management File (15704, 15706, 15739).

Also, Customer 15738, Product 15705, Price 15731, Quantity 15709, Amount 15738 and Sales 15740 are output onto the screen.

Fig. 158 is a flowchart of a program in the traditional methods which satisfies data process of Fig, 157.

Also, Fig. 159 is a series of codes of a program in COBOL language by the traditional methods, corresponding to the flowchart in Fig. 158.

As to process contents in Fig. 158 and Fig. 159, first, data on the screen 15701 (step 15801, 15901) are to be received.

Next, whether Receive 15801, 15901 was successful or not is examined (step 15803, 15903), and if Receive 15801, 15901 was not successful, an error code is set (step 15804, 15904) before jumping to Screen Send process (step 15829, 15929).

If Receive 15801, 15901 ware successful, a search key of the Product List File 15715 (step 15805, 15905) is to be set and Product List File 15715 is to be searched (step 15729, 15807, 15907).

Next, it is examined (step 15803, 15903) whether search (step 15729, 15807, 15907) of Product List File 15715 was successful or not, and if it was not successful, an error code is to be set (step 15810, 15910) and it jumps to Screen Send process (step 15829, 15829).

Then, Price 15719 on the Product List File 15715 is set into the price edit area on the screen (step 15731, 15811, 15911), the amount is calculated (step 15737, 15813, 15913) and set into the amount edit area on the screen (step 15738, 15813, 15913).

Next, the result of calculation of the amount (step 15737, 15813, 15913) is examined (step 15815, 15915). If it is equal to or above ¥10,000, Sales is calculated by multiplying by 0.8 (15817, 15917), otherwise it is calculated (step 15740, 15819, 15919) by multiplying by 0.9 (15819, 15919).

Then, Customer 15703, Product 15709 and calculated Sales 15740 to be set into the edit area of Order data management File 15721 (step 15821, 15921, 15823, 15923, 15825, 15925) and to be registered into Order data management File 15721 (step 15704, 15706, 15739, 15827, 15928).

Also, Customer 15703, Product 15705, Price 15731, Quantity 15709, Amount 15738, Sales 15740 are to be output onto the screen (step 15829, 15929).

Fig. 160 is a placement relational diagram between a Pallet concerned with T0 which has a basis on programs for words corresponding to, and how the Tense Control Vector is to be plotted on the Pallet, both of which belong to the principal logical structure unique to the present invention, which satisfies data process of Fig. 157. It is also a *Homogeneity Map.*

Fig. 161 is a placement relational diagram between a Pallet concerned with T1 which has a basis on programs for words corresponding to File, and both the Tense Control Vendor is to be plotted on the Pallet, both of which belong to the principal logical structure unique to the present invention, which satisfies data process of Fig. 157. It is also a *Homogeneity Map.*

Hereinafter, centering on the progress of the process of the program concerned with the principal logical structure unique to be present invention, an explanation is made on how each process step created by the traditional methods is satisfied synchronously.

First, T0W04 Pallet 16001 is activated by T0 Pallet Chain Function 16002. In the activated T0W04 Pallet 16001, the T0W04 Pallet Function 16000 starts to operate, and Duplication Vectors Y4F/Y4S from Product 16003 up to Sales 16013 out of YL4F/YL4S bundled in the heading part of the T0W04 Pallet 16001, start to operate autonomously in accordance with the logic shown in Fig. 29, with no need of considering any operational sequence. At this point, however, more of Pallets has started to operate, so there is no semantic data in the domain of all words, therefore all of Duplication Vectors end its process as being NOP (meaning No Operation. Described as 'NOP' hereinafter) by the examination (2901 and 2905) on whether the semantic data exists or not..

Next, L4F/L4S Homogeneity Vector 16014 from Product up to Sales 16024 out of YL4F/YL4S which is bundled in the Duplication Vector group of T0W04 Pallet 16001 starts to operate autonomously in accordance with the logic shown in Fig. 30 regardless of the sequence of operation. Also at this point, however, the same as the Duplication Vector's case, it ends the process remaining as NOP by the presence check 3001 of a heading semantic data. As a result of the above mentioned, T0W04 Pallet 16001 ends process remaining at the initial state of no semantic data in the domain of words bundled in T0W04 Pallet 16001.

Next, T0 Pallet Chain Function 16025 sends data (a state of no semantic data) resulted from the process in T0W04 Pallet 16001 to the display screen 15701, 16080 (step 16025). As a result, an initial state data is displayed on the screen 15701, 16080.

As to the process so far, the process is implemented by a separate software in the traditional methods, so Fig. 158 is not so indicative.

Next, against the screen 15701, 16080 on which the initial state data is displayed, an operator's consciousness rj works. The consciousness rj in this case cannot see a semantic data, which makes a life action to obtain semantic data operate. Practically, in order to obtain semantic data, the input operation of data which can be combined with semantic data, that is, data concerned with Customer 15703, Product 15705 and Quantity 15709 as well as the pushdown operation on Execute command which is equivalent to the start direction of semantic are implemented.

As a result of these, T0 Tense Pallet Chain Function 16027 operates to receive (16027) the screen data into the domain of words bundled in T0W02 Pallet 16029 and activates T0W02 Pallet 16029 (16027).

In the activated T0W02 Pallet 16029, first T0W02 Pallet Function 16030 starts to operate, Homogeneity Vectors L2S from Customer 16031 up to L2S Quantity 16035 autonomously operate in accordance with the logic shown in Fig. 26 regardless of the operational sequence, then examines on the data to see their attribute are the same as defined against the word in advance (2605).

Thereafter, P2 Routing Action Vector 16037 operates autonomously in accordance with the logic shown in Fig. 34, then sets (3403) a process route information which is the next-activating Pallet identifier that has been defined in advance against the word. As a Pallet identifier in this case, T0W03 Pallet 16039 is set in principle, except the direction of system blockade.

Next, when the operations of all Homogeneity Vectors bundled in T0W02 Pallet 16029 complete, T0 Pallet Chain Function 16038 operates and activates T0W03 Pallet 16039 (16038).

The above-mentioned process corresponding to the operation of Screen Receive 15801, 15901 in the traditional programs.

Next, in the activated T0W03 Pallet 16039 (16038), T0W03 Pallet Function 16042 starts to operate first, then Duplication Vectors Y3S from Customer 16043 up to Y3S Quantity 16047 which are bundled in T0W02G Pallet 16041 of the heading part of T0W03 Pallet 16039, starts to operate autonomously in accordance with the logic shown in Fig. 27 regardless of the operational sequence.

In each of Duplication Vectors Y3S from Customer 16043 to Y3S Quantity 16047, the examination on the presence of semantic data (2701) is implemented. In this instance, the data which were input by an operator has been received into the domain of words bundled in T0W02 Pallet 16029 by the T0 Pallet Chair Function (16027), thus those data are duplicated (copied) into the domain of words bundled in T0W02G Pallet 16041 of T0W03 Pallet 16039 (2705).

Next, in T0W03 Pallet Function 16050, Homogeneity Vectors R3F Product from 16051 to L3S Sales 16071, which are bundled in T0W04P Pallet 16049, start to operate autonomously in accordance with the logic shown in Fig. 28 regardless of the operational sequence.

In each of Homogeneity Vectors R3F Product from 16051 up to L3S Sales 16071, the examination on the presence of semantic data (2802) is implemented. In this instance, the Homogeneity Vectors R3F Product from 16051 up to L3S Sales 16071, which are bundled in TOWOP Pallet 16049, are the first operation, thus in all words corresponding to the Homogeneity Vectors, there are no semantic data. Accordingly, the examination (2804) on Self Creation (2803) and 'Acceptance' is implemented in accordance with the logic shown in Fig. 28. The examination (2804) on Self Creation (2803) and 'Acceptance' depends on the Self Creation specifications of each of Homogeneity Vectors shown below, so they are observed individually.

(1) The Homogeneity Vector specified by R3F Product 16051 and R3F Price 16053 is a Homogeneity Vector (R-type Duplication Vector) corresponding to a word located in the boundary of T0 and T1, so its Self Creation specifications is prescribed as follows:

T0W04P-R3F Product 16051
= T1W04P-L3F Product 16157
T0W04P-R3F Price 16053
= T1W04P-L3F Price 16158.

At this point, T1W04P has not operate and there is no semantic data in T1W04p, so Self Creation is not established. Accordingly, the examination (2804) on 'Acceptance?' of the Homogeneity Vector corresponding to a boundary word belonging to T0W04P gets 'false' at this point and ends process.

(2) The Homogeneity Vector specified by T3S Customer 16055, T3S Product 16057 and T3S Quantity 16059 is a Homogeneity Vector (Duplication Vector-type Homogeneity Vector) of the word belonging to T0W02G, that is, words belonging to the Input Screen, so its Self Creation specifications is prescribed as follows:

T0W04P-T3S Customer 16055
= T0W02G-Y3S Customer 16043
T0W04P-T3S Product 16057
= T0W02G-Y3S Product 16045
T0W04P-T3S Quantity 16059
= T0W02G-Y Quantity 16047

T0W02G has already operated at this point, the Self Creation is accepted because there is semantic data in T0W02G. Accordingly, the examination (2804) on 'Accepted?' of the Homogeneity Vector of the word belonging to T0W02G, that is, words belonging to the Input Screen, gets 'true' at this point and Self Created data are set (2811) into individual words' domain of T0W04P, then the process ends,
(3)The Homogeneity Vector specified by L3S Customer 16061, L3S Product 16063, L3S Price 16065, L3S Quantity 16067, L3S Amount 16069 and L3S Sales 16071 is a Homogeneity Vector of the word belonging to T0W4, that is, words belonging to the Output Screen, so its Self Creation specifications is prescribed as follows:

T0W04P-L3S Customer 16061
= T0W02G-T3S Customer 16043
T0W04P-L3S Product 16063
= T0W02G-T3S Product 16045
T0W04P-L3S Price 16065
= T0W04p-R3F Price 16053
T0W04P-L3S Quantity 16067
= T0W04P-T3S Quantity 16059
T0W04P-L3S Amount 16069
= T0W04P-L3S Quantity 16067
X T0W04P-L3S Price 16065
T0W04P-L3S Sales 16071
= T0W04P-L3S Amount 16069
X 0.8
T0W04P-L3S Sales 16071's equivalent word
= T0W04P-L3S Amount 16069
X 0.9

All Self Creation which can be established at this point is the Homogeneity Vector corresponding to the word belonging to the Input Screen. The examination on 'Accepted?' (2804) of these Homogeneity Vectors gets 'true' at this point, and the Self Created data are set (2811) into the domain of T0W04P corresponding to individual words, and additionally sets the restart flag (2815), then the process ends.
Next, T0W03 Pallet Function starts to operate and examines if the Homogeneity Vector of words belonging to T0W04P shall be restarted or not (16073).

In this instance, since a restart flag has been set in the Homogeneity Vector corresponding to words belonging to the Input Screen, the T0W03 Pallet Function 16050 once clears the restart flag and re-operates all Homogeneity Vectors corresponding to T0W04P, from R3F Product 16051 Homogeneity Vector to L3S Sales 16071.

Upon the restart of these Homogeneity Vectors, the examinations (2804) on 'Accepted?' of all Homogeneity Vectors gets 'false', and the next restart examination (16073) gets 'false' again, then the restart stops.

Next, the examination on the activation of T1 is implemented (16075). The condition of T1 activation is a prescribed condition that there shall be no semantic data in any of words belonging to T0W04P. Accordingly, at this point, the activation of T1 is implemented.

In the process mentioned so far, all the programs belonging to Fig. 160 has once operated, except for the P3 Route 16077, but in case of the corresponding traditional programs, it means that only Screen Receive 15801, 15901 has operated.

Now, next, the T1 Pallet Chain Function 16102 operates and the T1W04 Pallet 16101 is activated. In the activated T1W04 Pallet 16101, first, T1W04 Pallet Function 16185 starts to operate, and Duplication Vector Y4S/Y4F from Customer 16103 to Sales 16113, which are bundled in the heading part of T1W04 Pallet 16101, starts to operate autonomously in accordance with the logic shown in Fig. 29 regardless of the operational sequence. None of pallets of T1, however, has operated at this point, so there are no semantic data in all words' domain. Therefore, all of Duplication Vectors end process remaining NOP by the examination on the presence of semantic data (2901 and 2905).

Next, The Homogeneity Vector L4S from Customer 16115 up to 1L4F Sales 16125, out of YL4S/YL4F which is bundled in the Duplication Vector group of T1W04 Pallet 16101, starts to operate autonomously in accordance with the logic shown in Fig. 30 regardless of the operational sequence. At this point, however, similar to the case in Duplication Vector, the process ends remaining NOP upon the examination on the presence of semantic data (3001).

As a result of the above, the domain of words bundled in T1W04 Pallet 16101 is in an initial starts without a semantic data. Accordingly, there would be no value in registering it into the Order Data Management File 15721, 16180, so the Command Action Vector P4WR1TE16126 in charge of registering into Order Data Management File has no semantic quality upon the Execute condition examination 3301 in the heading of Fig. 33, so that the direction 16127 of the registration to Order Data Management File ends process remaining NOP. Remaining this state, T1W04 Pallet 16101 ends.

Next, T1 Pallet Chain Function 16128 operates and activates T1W02 Pallet 16130 (16128). In the activated T1W02 Pallet 16130, T1W02 Pallet Function 16135 starts to operate, and the Command Vector P2READ16133 in charge of reading from Product List File (15715, 16090) bundled in T1W02 Pallet 16130 operates, but there is no semantic data in the data of the word to become a search key, so the Command Action Vector P2READ16133 to read from Product List File ends process remaining NOP, because the execution condition examination 3301 in the heading in the logic described in Fig.33 has no semantic quality.

Next, the Homogeneity Vector L2F Product 16131, L2F Price 16132 bundled in T1W02 Pallet 16130 operates autonomously regardless of the operational sequence, but because the directive Command Action Vector P2READ16133 to read from Product List File ended process remaining NOP, the Empty examination 2601 of Fig. 26 has no semantic quality and ends process sustaining NOP.

Thereafter, P2 Routing Action Vector 16134 operates autonomously in accordance with the logic shown in Fig. 34 and sets a process route information being the next activating Pallet identifier that has been defined for the word in advance (3403). As the next activating Pallet identifier in this instance, T1W03 Pallet 16141 is set in principle, except for the direction of system blockade.

Next, the T1 Pallet Chain Function 16140 operates and activates T1W03 Pallet 16141 (16140).

In the activated T1W03 Pallet 16141, T1W03 Pallet Function 16146 starts to operate first, and the Duplication Vector Y3F Product 16143, Y3F Price 16144 bundled in T1W02G Pallet 16142 in the heading part of T1W03 Pallet 16141 starts to operate autonomously in accordance with the logic shown in Fig. 27 regardless of the operational sequence. In each of Duplication Vectors Y3F Product 16143, Y3F Price 16144, the examination on the presence of semantic data 2701 is implemented. In this instance, because the directive Command Action Vector P2READ16133 to read from Product List File ended process remaining NOP, the examination on the presence of semantic data 2701 has no semantic quality thus ends process sustaining NOP.

Next, in the T1W03 Pallet Function 16148, the Homogeneity Vector R3S Customer from 16151 to L3F Sales 16161 bundled in T1W04P Pallet 16150 starts to operate autonomously in accordance with the logic shown in Fig. 28 regardless of the operational sequence. In each of Homogeneity Vectors R3S Customer from 16151 to L3F Sales 16161, the examination 2802 on the presence of semantic data is implemented first.

In this instance, the Homogeneity Vector R3S Customer from 16151 toL3F Sales 16161 bundled in T1W04P Pallet 16150 operates for the first time, so there are no semantic data in all words corresponding to the Homogeneity Vector. Accordingly, the Self Creation (2803) and the examination (2804) on the 'Accepted?' are implemented in accordance with the logic shown in Fig. 28. This 'Accepted?' examination (2804) depends on the Self Creation specifications of each of Homogeneity Vectors shown below, so they are observed individually.

(1) Homogeneity Vector specified by R3S Customer 16151, R3S Product 16152 and R3S Quantity 16153 is a Homogeneity Vector (R-type Duplication Vector) corresponding to a word located in the boundary of T0 and T1, so its Self Creation specifications is prescribed as follows:

T1W04P-R3S Customer 16151
= T0W04P-L3S Customer 16061
T1 W04P-R3S Product 16153
= T0W04P-L3S Product 16063
T1W04P-R3S Quantity 16153
= T0W04P-L3S Quantity 16059

The T0W04P has already operated at this point, so there is a semantic data in T0W04P, and the Self Creation is accepted. Accordingly, the examination (2804) on 'Accepted?' in the Homogeneity Vector corresponding to boundary words belonging to T1W04P gets 'true' at this point, sets (2811) semantic data into the domain of T1W04P of individual words, and additionally sets the restart flag (2815), to end the process.

(2) The Homogeneity Vectors specified by T3F Product 16155 and T3F Price 16154 are Homogeneity Vectors (Duplication Vector-type Homogeneity Vector) of the word belonging to T1W02G, that is, words belonging to the Input File, so its Self Creation specifications is prescribed as follows:

T1W04P-T3F Product 16155
= T1W02G-Y3F Product 16143
T1W04P-T3F Price 16154
= T1W02G-Y3F Price 16144

T1W02G has not operated at this point, so this Self Creation has not been established because there is no semantic data in T1W02G. Accordingly, the examination (2804) on 'Accepted?' in the Homogeneity Vector of the word belonging to T1W02G, that is, words belonging to the Input File, gets 'false' at this point and ends process remaining NOP.
(3) The Homogeneity Vector specified by L3F Product (concerned with Product List File) 16157, L3F Price 16158, L3F Customer 16159, L3F Product (concerned with Order Data Management File) 16160 and L3F Sales 16161 is a Homogeneity Vector of words belonging to T1W04, that is, words belonging to Output File, so its Self Creation specifications is prescribed as follows:

T1W04P-L3F Product (Product List File) 16157
= T1W04P-T3F Product 16155
T1W04P-L3F Price 16158
= T1W04P-T3F Price 16154
T1W04P-L3F Customer 16159
= T1W02G-T3F Customer 16151
T1W04P-L3F Product (Order Data management) 16160
= T1W04P-T3F Product 16155
T0W04P-L3F Sales 16161
= T1W04P-L3S Quantity 16153
X T1W04P-L3F Price 16158
X 0.8
T0W04P-L3S Sales 16071's equivalent word
= T1W04P-L3S Quantity 16153
X T1W04P-L3F Price 16158
X 0.9

And, Self Creation accepted at this point is only Homogeneity Vectors concerned with words belonging to Input Screen. The examination on 'Accepted?' (2804) of these Homogeneity Vectors gets 'true' at this point, and the Self Created data are set (2811) into the domain of T0W04P corresponding to individual words, and additionally sets a restart flag (2815), then the process ends. Next, T1W03 Pallet Function 16148 starts to operate and examination (16162) whether to restart or not the Homogeneity Vector of words belonging to T1W04P. In this instance, because the restart flag has been set in the Homogeneity Vector corresponding to words belonging to the Input Screen, the restart flag is once cleared, then the T1W03 Pallet Function 16148 again operates all Homogeneity Vectors corresponding to T1W04P from R3S Customer 16151 Homogeneity Vector to L3F Sales 16161.

Upon restart of these Homogeneity Vectors, the examination (2804) on 'Accepted?' of all Homogeneity Vectors gets 'false' and the next restart examination (16162) gets 'false', then the restart stops. Next, an examination (16163) on T0 activation is implemented. The T0 activation condition is prescribed as a condition that semantic data is established in all of words belonging to T1W04P and that the registration into File has been completed in T1W04. Accordingly, the activation of T0 is not implemented at this point.

Through the process mentioned above, all programs belonging to Fig. 160 and Fig. 161 have once operated except for P3 Routing 16077, 16164, but words which assume semantic quality are only these belonging to the Input Screen. This state is shown by an ellipse in Fig.162 and Fig.163. In the corresponding traditional programs, it means that only Screen Receive 15801, 15901 has operated.

Thereafter, the P3 Routing 16164 operates autonomously in accordance with the logic shown in Fig. 34 and sets a process route information being the next activating Pallet identifier that has been defined against the word in advance (3403). In this instance, as the next activating Pallet identifier, T1W04 Pallet 16101 is set.

Next, the T1 Pallet Chain Function 16102 operates and the T1W04 Pallet 16101 is again activated. In the activated T1W04 Pallet 16101, the T1W04 Pallet Function starts to operate first and the Duplication Vector Y4S/Y4F Customer from 16103 to Sales 16113, out of YL4S/YL4F bundled in the heading part of T1W04 pallet 16101 starts to operate autonomously in accordance with the logic shown in Fig 29 regardless of the operational sequence.

At this point, any Pallets of T1 have operated, and semantic data is existent in the domain of words shown in Fig. 163. Thereupon, the Duplication Vector Y4S Customer from 16103 and up to Y4F Sales 16113 gets semantic quality upon the presence examination (2901) of the Duplication Vectors corresponding to words possessing semantic data, that is, Y4S Customer 16103, Y4S Product 16104, Y4S Quantity 16105, Y4F Product 16109, Y4F Customer 16111, and Y4F Product 16112. The data is duplicated (copied) into the domain of individual words, and in succession, the edit is implemented so as to enable the registration into Order Data Management File in the Homogeneity Vector L4S Customer from 16103 to L4F Sales 16113 which is bundled next to the Duplication Vector group of T1W04 pallet 16101.

Regardless of the result of the above, the semantic data in the domain of the word bundled in T1W04 Pallet 16101 is only a part. Accordingly, there is no value in registering into Order Data Management File 15721, 16180, so the Command Action Vector P4WRITE 16126 to register into the Order Data Management File gets no semantic quality at the execution condition examination in the heading part in Fig. 33, then the direction 16127 to register into the Order Data Management File ends process remaining NOP. Sustaining this status, T1W04 Pallet 16101 ends its operation.

Next, the T1 Pallet Chain Function 16128 operates and again activates T1W02 Pallet 16130 (16128). In the activated T1W02 Pallet 16130, T1 W02 Pallet Function starts to operate first and the Command Vector P2READ 16133 operates, which reads from Product List File 15715, 16090 bundled in T1W02 Pallet 16130. Then, at this time, a semantic data exists in R3S Product 16152's data which is a word to become a search key, thus upon the Execute condition examination (3301) in the heading part of Fig. 33 gets semantic quality, then the Command Action Vector P2READ 16133 to read from Product List File operates and the data read is set into the domain of words of T1W02 Pallet.

Next, the Homogeneity Vector L2F Product 16131, L2F Price 16132 bundled in T1W02 Pallet 16130 operates autonomously regardless of the operational sequence, and the Command Vector P2READ16133 to read from Product List File operates, so the 'Empty' examination (2601) in Fig. 26 gets semantic quality and implements the Attribute examination (2605), then ends.

Thereafter, the P2 Routing Action Vector 16134 operates autonomously in accordance with the logic shown in Fig. 34, then sets (3403) a process route information being the next-activating Pallet identifier that has been defined in advance against the word. As the next-activating Pallet identifier, T1W03 Pallet 16141is set in principle, except for the direction of system blockade.

Next, the T1 Pallet Chain Function 16102 operates and activates T1W03 Pallet 16141 (16140).

Next, in the activated activates T1W03 Pallet 16141, T1W03 Pallet Function starts to operate first and the Duplication Vector Y3F Product 16143, Y3F Price 16144 bundled in T1W02G Pallet 16142 in the heading part of T1W03 Pallet 16141 starts to operate autonomously in accordance with the logic shown in Fig. 27 regardless of the operational sequence. In each of Duplication Vectors 16143 and up to 16144, as the examination on the presence of semantic data (2701) is implemented. In this instance, tas he Product List File READ Command Action Vector P2READ16133 has already operated, the presence examination (2701) on semantic data gets true, and the semantic data of T1W02 is duplicated (copied) into the domain of the T1W02G word.

Next, in T1W03 Pallet Function, Homogeneity Vector R3S Customer from 16151 to L3F Sales 16161, which are bundled in T1W04P Pallet 16150, starts to operate autonomously in accordance with the logic shown in Fig. 28 regardless of the sequence of operation. In each of Homogeneity Vector R3S Customer from 16151 to L3F Sales 16161, the examination on the presence of semantic data (2802) is implemented at first.

In this instance, the Homogeneity Vectors R3S Customer from 16151 to L3F Sales 16161, which are bundled in T1W04P Pallet 16150, operates once again, so in the words corresponding to the Homogeneity Vector, semantic data exists as shown in Fig. 163. Accordingly, the Homogeneity Vector of the words with existing semantic data in accordance with the logic shown in Fig. 28 gets 'false' upon the Empty examination (2802), but the Homogeneity Vector corresponding to the words without existing semantic data gets 'true' upon the Empty examination (2802), thereby implementing the Self Creation (2803) and the examination (2804) on 'Accepted?' In this 'Accepted?' examination (2804), all gets semantic quality according to the Self Creation specifications of each Homogeneity Vector as shown below.

T1W04P-T3F Product 16155
= T1W02G-Y3F Product 16143
T1W04P-T3F Price 16154
= T1W02G-Y3F Price 16144
T1W04P-L3F Price 16158
= T1W04G-T3F Price 16154
T0W04P-L3F Sales 16161
= T1W04P-L3S Quantity 16153
X T1W04P-L3F Price 16158
X 0.8
T0W04P-L3S Sales 16071's equivalent word

= T1W04P-L3S Quantity 16153
X T1W04P-L3F Price 16158
X 0,9

The examination on 'Accepted?' (2804) of these Homogeneity Vectors gets 'true' at this point, and the Self Created data are set (2811) into the domain of T1W04P corresponding to individual words, and additionally the restart flag is set (2815), then the process ends.

Next, T1W03 Pallet Function 16148 starts to operate and examines if the Homogeneity Vector of words belonging to T1W04P shall be restarted or not. In this instance, the restart flag has been set in the Homogeneity Vectors corresponding to words above, except for those accepted previously, so the restart flag is once cleared, then the T1W03 Pallet Function 16162 again operates the Homogeneity Vectors from R3S Customer 16151 to L3F Sales 16161.

Upon the restart of these Homogeneity Vectors, the examination (2804) on 'Accepted?' of all Homogeneity Vectors gets 'false' and the restart stops here.

Next, the examination on the activation of T0 is implemented (16163). The condition of T0 activation is prescribed in that semantic data be accepted for all words belonging to T1W04P and the in that registration into File have been completed in T1W04. At this point, however, semantic data have been accepted for all words belonging to T1W04M but the registration into File in T1 W04 is not completed, so the activation of T0 is not implemented.

Thereafter, the P3 Routing 16164 operates autonomously in accordance with the logic shown in Fig. 34 and then sets (3403) a process route information being the next-activating Pallet identifier that has been defined in advance against the word. In this case, as the activating Pallet identifier, T0W04 Pallet 16101 is set.

Thereupon, the T1 Pallet Chain Function 16102 operates towards the completion of the registration into File T1W04 and T1 W04 Pallet 16101 is again activated by the T1 Pallet Chain Function 16102. In the activated T1W04 Pallet 16101, the T1W04 Pallet Function 16185 starts to operate first and the Duplication Vector Y4S Customer from 16103 and Sales 16113 bundled in the heading of the T1W04 Pallet 16101 starts to operate autonomously in accordance with the logic shown in Fig. 29 regardless of the operational sequence. At this point, any Pallets of T1 are operating, and semantic data are existent for the words belonging to T1W04. Thereupon, the presence examination (2901) of the Duplication Vectors from 16103 to 16113 corresponding to the words gets semantic quality, duplicate the semantic data of words belonging to T1W04 into the domain of individual words, then the edit is implemented so as to enable the registration into Order Data Management File in the Homogeneity Vectors which are bundled next to Duplication Vector group of T1W04 Pallet 16101.

Through the process mentioned above, the semantic data in the domain of the words bundled in T1W04 Pallet 16101 become all. Accordingly, the registration into the Order Data Management File 15721, 16180 is worthy, so the Command Action Vector P4WRITE 16126 into the Order Data Management File gets a semantic quality upon the Execute condition examination 3301 in the heading of Fig. 33, then the issuance of the registration command (16127) into the Order Data Management File is implemented.

Next, the T1 Pallet Chain Function 16102operates and activates (16027) T1W02 Pallet 16130. In the activated T1W02 Pallet 16130, the T1W02 Pallet Function 16135 starts to operate first, and the Command Action Vector P2READ 16133 to read from Product List File 15715, 16090, which is bundled in T1W02 Pallet 16130, operates. Then, the to-read Command Action Vector P2READ 16133 has already operated, so the process ends remaining NOP.

Next, the Homogeneity Vector L2F Product 16131, L2F Price 16132 bundled in T1W02 Pallet 16130 starts to operate autonomously regardless of the operational sequence and ends after implementing the overlap process of the attribute examination (2605).

Next, the T1 Pallet Chain Function 16102 operates and activates T1W03 Pallet 16141 (16140).

Next, in the activated T1W03 Pallet 16141, the T1 W03 Pallet Function 16146 starts to operate first, and the Duplication Vectors Y3F Product 16143, Y3F Price 16144, which are bundled in T1W02G Pallet in the heading of T1W03 Pallet 16141, start to operate autonomously in accordance with the logic shown in Fig. 27 regardless of the operational sequence. In each of the Duplication Vectors Y3F Product 16143, Y3F Price 16144, the presence examination of semantic data (2701) is implemented. In this instance, the Command Action Vector P2READ 16133 to read from Product List File has already operated, so the presence examination of semantic data (2701) gets 'true', then semantic data of T1W02 is duplicated (copied) into the domain of the words of T1W02G Pallet.

Next, in T1W03 Pallet Function 16148, the Homogeneity Vectors R3S Customer for 16151 to L3F Sales 16161, which are bundled inT1 W04P Pallet 16150, starts to operate autonomously in accordance with the logic shown in Fig. 28 regardless of the operational sequence. In each of the Homogeneity Vectors R3S Customer from 16151 to L3F Sales 16161, the presence examination (2802) of semantic data is implemented first. In this instance, the Homogeneity Vectors R3S Customer from 16151 to L3F Sales 16161, which are bundled inT1 W04P Pallet 16150, operate again, so words corresponding to the Homogeneity Vectors all became semantic data. Accordingly, in accordance with the logic shown in Fig. 28, the Homogeneity Vectors become 'false' upon the Empty examination (2802) and ends remaining NOP.

Next, the T1W03 Pallet Function 16148 starts to operate and examines whether to restart or not the Homogeneity Vectors of words belonging to T1W04P (16162). In this instance, the restart flag has not been set in any Homogeneity Vectors, so the restart does not occur.

Next, the T0 activation examination 16163 is implemented. The T0 activation condition is prescribed in that semantic data significant data be established for all words belonging to T1W04P and in that the registration into File be completed in T1W04. At this point, because semantic data is established all words belonging to T1W04P and the registration into File has been completed in T1W04, the activation of T0 is implemented.

The T0 Pallet Chain Function 16038 activated from T1 Pallet Chain Function operates and activates again T0W03 Pallet 16039 (16038).

Next, in the activated T0W03 Pallet 16039, T0W03 Pallet Function 16042 starts to operate first, and the Duplication Vectors Y3S Customer from 16043 to Y3S Quantity 16047, which are bundled in T0W02G Pallet 16041 in the heading part of T0W03 Pallet 16039, start to operate autonomously in accordance with the logic shown in Fig. 27, regardless of the operational sequence. In each of the Duplication Vectors Y3S Customer from 16043 to Y3S Quantity 16047, the presence examination (2701) of semantic data is implemented. In this instance, by the T0 Pallet Chain Function 16002, the data input by an operator have been received (16027)into the domain of words bundled in T0W02 Pallet 16029, so those data are duplicated (copied) by overwriting into words' domain bundled in T0W02G Pallet 16041 of the T0W03 pallet 16039.

Next, in T0W03 Pallet Function 16050, the Homogeneity Vectors R3F Product from 16051 to L3S Sales 16071, which are bundled in T0W04P Pallet 16049, starts to operate autonomously in accordance with the logic shown in Fig. 28 regardless of the operational sequence. In each of the Homogeneity Vectors from 16051 to 16071, first, the presence examination (2802) of semantic data is implemented. In this instance, the Homogeneity Vectors from 16051 to 16071 bundled in T0W04G Pallet 16049 operate again and semantic data are all established in the T1 side, so semantic data are existent in all words corresponding to the Homogeneity Vectors. In such a state, the Self Creation and the examination on 'Accepted?' (2804) are implemented in accordance with the logic shown in Fig. 28, and semantic data are created for all. The examination of 'Accepted?' (2804) of these Homogeneity Vectors gets 'true', then the Self Created data are set (2811) into the domain of T0W04P corresponding to the individual words, and additionally the restart flag is set (2815), thereby ending the process.

Next, T0W03 Pallet Function starts to operate and examines whether to restart or not the Homogeneity Vectors of words belonging to T0W04P. In this instance, the restart flag has been set in all Homogeneity Vectors for all words, so the restart flag is once cleared then the T0W03 Pallet Function 16050 again operates the Homogeneity Vectors from R3F Product 16051 to L3S Sales 16071. However, the Empty examination (2802) of these Homogeneity Vectors get 'false', then the restart stops here.

Next, The T1 activation examination 16075 is implemented. The T1 activation condition is prescribed in that semantic data shall not be available in any of words belonging to T0W04M. Accordingly, the T1 activation is not implemented at this point.

Lastly, T0W04 Pallet 16001 is activated by the T0 Pallet Chain Function 16002. In the activated T0W04 Pallet 16001, T0W04 Pallet Function 16000 starts to operate first, and the Duplication Vector bundled in the heading part of T0W04 Pallet 16001 starts to operate autonomously in accordance with the logic shown in Fig. 29 regardless of the operational sequence. At this point, all of the Pallets is operating and semantic data are existent in the domain of all words. So, the presence examination of semantic data for any Duplication Vectors gets 'true' and the semantic data are duplicated (copied) into the domain of each word, thereby ending the process.

Next, the Homogeneity Vector bundled next to the Duplication Vector group of T0W04 Pallet 16001 starts to operate in accordance with the logic shown in Fig. 30 regardless of the operational sequence. At this point, the same as in the case of the Duplication Vector, the Empty examination (3001) gets 'true' and the editing of semantic data is implemented so as to enable the display onto the screen, thereby ending the process.

Next, T0 Pallet Chain Function 16002 sends the data resulted from the process in T0W04 Pallet 16001 (which is in a state to be edited so as to display the semantic data onto the display screen) to Screen 15701, 16003 (16025). As a result, data of the aimed process result is displayed onto Screen 15701, 16003.

The above series of explanation clarifies the process of creation of data code of self words only by data (that is, by the autonomous judgment regardless of the process sequence) in which a program of every word identifier 401 possessing the principal logical structure unique to the present invention works so as to keep mutual consistency. The process result has ended in the same state as by the traditional method shown in Fig. 158 and Fig. 159.

This has also proven the correctness of the internal structure of existence which is a theoretical base of the program structure of the present invention.

The determination of such a program structure becomes synonymous with a solving a function, and the black-box part is completely eliminated, thereby leading to the dissolution of all traditional problems associated with software.

Also, how the program is processed by the present invention can be rephrased to be the scheme of consciousness of our living body, or the action itself of nervous cells (neuron). Rhetorically speaking further, since it reminds us of the working of the 'HAL computer' introduced into the film The Odyssey "2001" as a computer possessing intellectual ability, the software based on the principal logical structure unique to the present invention is also called neuron-type software.

And, the determination and generation of such a software can be realized only by using the identical structure shown in form Fig. 26 to Fig. 35, for any words, and by bundling it into the three kinds of Pallet without a recessing to consider its order.

4.3 Disclosure of the present invention of

This invention is to advocate the following view pints:

XXI. The software essence exists as 'an entity becoming a meaning' composed of a series of commands, and not as a structure composed of a matter with a mass.
XXII. The 'entity becoming a meaning' is not an object of human cognition but 'something' grasped in mind (consciousness) as a result of perception of individual humans.
XXIII. In view of existing as 'an entity becoming a meaning', that is, existing in the mind of individual humans as a result of perception, the cognitive-object software is an existence phenomenon and therefore a visible existence into that the requirement composed of a series of words and the program composed of a series of codes have been made into phenomenon. The theoretical base of the existence phenomenon established as an existence phenomenon, however, is an invisible existence as analyzed in the related technology. Therefore, the recognition of the theoretical base accompanies the uncertainty.
XXIV. On the other hand, when the computer recognizes the theoretical base established a program composed of a series of codes never accompanies the uncertainty.

Based on the above, this invention is to achieve the following in the relationship between the document which regulates the software requirement and a series of codes which regulate the software's program;

XXV. By minimizing the volume of the document composed of what becomes a meaning whose essence is uncertainty, the uncertainty of the requirement is made the smallest.
XXVI. Based on the understanding that software is a concept to be established by a requirement and a program building a complimentary relationship, the part insufficient to establish the software only by the requirement is to be complemented by a series of codes with are not accompanying the uncertainty, which can be determined by the theoretical base that can be recognized by anyone with a single meaning as for even one statement in a series of codes, that is, enabling to materialize software without a black box.

Traditionally, there was a general judgment among patent administrations which regarded a concept of 'material' as inappropriate in a software field. Due to this reason, for patent application, for example, the theoretical base of the justification of software invention has usually been explained by the natural rule possessed by the structure in which technical terms such as 'recording media', 'processing apparatus' et al are distributed.

This invention, however, grasp a software that exists as the 'entity becoming a meaning', especially of its universal structure, based on the structural semantics (that is, a theory giving a rule for meaning formation) that stands on a physical cognitive view (that is, a way enabling objective and univocal-cognitive grasping), and not based on the semantics meant by philology.

In other words, by the natural rule is meant what can be expressed by equation of the casual relation between the cause and the result, and if it is regarded as what rules a relation in which anyone can inevitably obtain the same solution by substituting concrete entities into the variables of the function located at the right side of the equation, the software structure in the present invention excellently satisfies the 'natural rule' requirement in light of the fact that it takes the universal rule possessed by the Scenario Function as theoretical base.

As subject matters of the present invention that takes a premise of the 'natural rule', the 'Homogeneity Map' for example, can be mentioned which is a means to grasp a requirement by minimizing the volume of documents regulating the requirement (explained later).

Also, mentioned in the following, for example, the subject matters thereof also include: Tense Control Vectors ('Duplication Vector' and 'Homogeneity Vector') which can be regarded as a tool enabling to determine logic (process logic) up to 1 statement with a solid logical base univocally conceivable to anyone, by maximizing the number of codes Action Vector being a function to univocally determine the program for every word; Pallet Function to univocally determine the program called a Pallet and Pallet Chain Function to univocally determine the program which control the relation between Pallets. And, all of these are what faithfully reflect the rule possessed by 'Scenario Function'.

Also, these subject matters of the present invention are technology introduced from the fundamentally new outlook on the world that cannot be found in any traditional software technologies. These backgrounds inevitably make the present invention renew, technologies in any fields concerned with software shall.

The other subject matters of the present invention which takes a premise of the 'natural rule', include, for example: The determination method of data structure which is an object of process logic; The determination method of requirement; The generation method of software; The analysis and transplant method of the existing software; The maintenance method of software; The development method of software; The cost estimate method of software; The development management method of software; The operational management method of software; The evaluation method of software; The processing apparatus of software; The generating apparatus of software; The recording media of software; The business method of software development; The logical structure of parallel processing devices; and The inference mechanism et al.

4.3.1 Method of conception to grasp the essence of software

Software is one of the elements consisting the information processing system. That is, the information processing system is composed of'hardware', 'software' and 'human concerns'.

Hardware is composed of a computer called CPU and various peripheral devices.

Software is composed of the program 201a, which is composed of a series of symbols (codes) (may be called a series of codes hereinafter) that are a group of directions amounted onto computer (CPU) in order to operate the hardware as prescribed, and the requirement definition document 201b, the conditions to determine the codes as well as the conditions to determine various factors of the hardware constituents and their configuration.

Human concerns are composed of 'development requiring party', 'development engineers' and 'user' of the information processing system.

As to hardware and software as well, there are design drawings to define constituent factors so as to perform prescribed purpose and the requirement definition document 201d to define various factors of constituents. This requirement definition document is written by 'development engineers' based on language uttered by the 'development requiring party' as an intention of development. Hardware as well as software are realized based on the requirement definition document.

With regards to cases both of hardware and of software, the requirement definition document is expressed by natural language and drawings. The nature of this requirement definition document cannot be a structure composed of a matter possessing a mass, i.e., physical properties; it is rather an 'entity becoming a meaning' which is a means to communicate what is intended.

What is realized by the requirement definition document 201b is a structure composed of a matter possessing a mass, i.e., physical properties in case of hardware and, in contrast, in case of software it is a program 201a composed of a series of codes which are a group of directions to operate computer as prescribed. This program does not possess a mass, therefore it is not a structure composed of a matter possessing physical properties, and it is something of a nature of 'possessing a meaning'. As represented by the term 'software', the nature of software is different in quality from that of hardware.

The concrete nomenclature and nature of an elementary particle that is the minimum of a matter is expressed by language. Also, the nomenclature and scheme of the maximum of matter, i.e., the universe, is expressed by language. Further, sensations such as 'beautiful', 'pleased', 'comfortable' et al are also expressed by laguage. In this expression, when the object to express is a matter possessing a mass, a structure with physical properties, then the scale, the nature or the capability et al which are various factors of the structure can be recognized by objective and common perception by the natural rule. However, How to perceive the object with the expressed scale, nature and ability et al, that is, what value and meaning it possesses cannot be obtained as an objective and common perception because it is buried in the mind of humans who recognize the meaning.

Also, as a rule on how to arrange words to communicate to others for expressing an object, the humankind has established the grammar, but the human's sense of value or the meaning grasped does not materialize only by the grammar, and the humankind has not found a rule yet to handle this domain. For example, a sentence "I am lion." is not incorrect grammatically, while its meanings are of various kinds.

That is, the 'expanse of meaning' has a characteristics that it is impossible to inevitably grasp the contour (or boundary) of the clear expanse as an objective and univocal thing. The inability to grasp the contour of the meaning expanse objectively means that the 'meaning' cannot be defined as the absolute and univocal thing, that is after all, that the common recognition of the meaning can never be attained.

Accordingly, it can be concluded that a meaning is originally 'uncertain'.

This can be proven as follows by using a basic axiom of the set theory in mathematics. That is, in the transfinite set theory' established by Cantor, a 'set' is one Whole U. And, the constituents m of the Whole (It is called 'element' of the whole set U.) can be individually defined and discriminated from each other, and they are elements of our intuition or speculation (that is, giving a meaning). As cited likewise, the meaning possessed by individual words is the whole created by grouping of elements of a set, and it can be regarded as what was established in the set body.

An axiom of the set theory has it that the set body of meaning of the language is composed of subsets of $2^n$ pieces, if the number of elements m of our human intuition or speculation that can be defined individually and discriminated from each other is designated as plural pieces n. Accordingly, in order to make the meaning of the one word definite and univocal, and not uncertain, it shall be able to strictly regulate each of the pieces so that the meaning attached to the individual pieces of subsets in $2^n$ pieces can be defined solidly and univocally. The condition to enable this regulation makes it indispensable to have the understanding of what the meaning-giving element m is, as well as of what the condition for materializing its subsets is. The humankind, however, has not discovered such an element, yet.

Also, in subsets of $2^n$ pieces, the 'Empty set' is contained, and the existence of the 'Empty set' means that the contour (or boundary) cannot be decided. In other words, it is synonymous with 'infinity'. This 'infinity' is expressed mathematically as symbol$\infty$, but nobody has ever discovered what the infinity really is. All of these mentioned above is clear in view of the fact that this is called as B. Russell's 'irrationality.' Conclusively, the meaning attached to a word is 'uncertain'.

Before anything when the production of software is considered, we must be able to delete the arbitrariness. To delete arbitrariness from software production means that it shall be possible to obtain the same codes no matter who creates it. This is because no arbitrariness is meant to be that there is no room for the engineer's capriciousness to enter, who is engaged in the software production.

Now, the traditional technical problems are thought of as attributable to the inability to completely wipe out the room for an arbitrariness to enter in the interpretation of the 'development intention' possessed by the development requiring party, as for the upstream concerns, first of all. As for the downstream concerns as next, the cause is considered to be rooted in the fact that we could not have a program possessing the independence of the word alone without involving arbitrariness against individual words consisting the requirement uttered in language by the development requiring party as a 'development intention'.

However, 'to delete arbitrariness is, after all, a consequential. In order to invite this consequential event as a state of 'deleting arbitrariness, we have to return to the essence of software, to elucidate the essence of software, and to build a system that enables to separate, in its essential level, the codes which are an entity of software from the personal 'interpretation' behavior which is produced in the process leading to the determination of there codes.

These are because, if one is to apply expandingly the conception, without reconsideration, that software is not only to grasp the relation among the consequential events, which are each an existence phenomenon embodying as a speech and behavior that is conclusively actualized by taking human's logical structure/thinking (that is, perception about an object) as the original point but also to simulate the relation by using terms understandable to computer, it eventually leads to that the 'development intent' of the development requiring party who determined to utter the language as what have to be uttered word would be ignored.

That is, in the process of grasping the 'development intent' of the development requiring party so that development engineers may convert the relation among consequential events that are an existence phenomenon embodied as a speech and behavior into terms to be understood by computer, it is impossible to accomplish it without an entry of personal arbitrariness of development engineers.

Therefore, in order to delete the arbitrariness, it is necessary to simulate a logical structure as it is, which is ought to be latent in the domain of the depths of consciousness which determines an actualized word, without an entry of personal arbitrariness of development engineers.

'Techniques' and 'tools' proposed in variety so far were not what observes the above-mentioned logical structure which is ought to be latent in the domain of the depths of consciousness, therefore it is acknowledged that none of solutions could be obtained in handling problems in a software production.

For now, what to bring about a dramatic and quality innovation into a software production must be sought in a development methodology which simulates the logical structure, as it is, latent in the domain of the depths of consciousness that can delete arbitrariness,.

In the first place, a development requirement of the information process system is expressed by 'language (words)'. A program which is a development result is also created by 'language (words)'. The meaning of the 'words' cannot always be the same accurately between the requirement uttering side and the requirement receiving side. This is because the interpretation of the 'meaning' varies depending upon environment and experience of humans. For this reason, in development activity, a program had to be created by 'interpreting' the requirement expressed in language.

As long as 'words' are used, as they are, however, with which a meaning cannot be regulated clearly that is, univocally to their details it is naturally impossible to reduce a mental activity, and the generated program can never reflect 100 percent the intent of the requirement-uttering side. In addition, during maintenance work, it is not always possible that the intent be understood the same as at the point of programming and that the modification be implemented adequately. In light of the standardization of work being also based on language, a mental activity of interpretation cannot be reduced, which is matural. Thus, no ultimate solution cannot be attained even by means of work standardization and document reinforcement.

On the other hand, a computer never interprets a 'meaning' humanly, and, not much to say, it simply handles symbols (codes). So to speak, a 'meaning' is something that, human attaches in his mind to the data code be sees displayed by computer as codes instructed, which cannot be expressed in statement. The data code must be the information 'expected' in the mind of the development requiring party against the words displayed into data fields corresponding to individual words which consist the requirement uttered in language as 'development intention' which was perceived in the mind of the development requiring party.

Likewise, in pursuing problems held by the traditional technologies, it concludes that, in software production, a hardware technique (a physical structure approach), then-current main stream, has been taken concerning what was literally soft existence in the mind, that is, software.

Lyee has been realized to fundamentally solve problems of the traditional technologies as mentioned above.

That is, Lyee discloses a conception to clarify software essence based on a conception entirely different from the traditional ones in that Lyee, in terms of the relationship between one 'existence phenomenon' expressed as utterance in capturing an existence phenomenon called a natural phenomenon and the other one 'existence phenomenon', and in terms of the relationship between the existence phenomenon and individually uttered 'existence phenomenon', that is, meanings possessed by individual 'words' or the 'intention' aiming to invite the 'words' to be embodied as 'words', Lyee advocates that in the relationship of these two relations, the former relation, that is, the relation between the one 'existence phenomenon' expressed as utterance by grasping an existence phenomenon called a natural phenomenon and the other one 'existence phenomenon' is independent, and that the latter relation, that is, individually uttered 'existence phenomena', that is, the meanings possessed by individual 'words' or the 'intention' aiming to invite the 'words' to be embodied as 'words', is of synchronicity nature, therefore not allowing any room for arbitrariness to enter.

4.2.2.A rule establishment method of software

The essence of software is, as explained in Fig. 2, a concept to generalize the program 201a composed of a series of codes and the requirement definition document 201b composed of a series of words which regulated conditions for determining codes. In other words, software is, as explained in Fig. 3, an existence being a meaning in which a complementary-set relation 305 is formed between the product 301, which became a visible existence in language actualized as a result of behavior of giving a meaning, and the invisible logic 303 which covers from the origin of a meaning-giving behavior to embodiment of the product 301.

However, a computer is a mere machine that executes faithfully as directed by a command given with a certain signal, and it never interprets a meaning of invisible logic. This is clear in light of the essence of computer.

This means that, unless elucidating 'a thinking scheme called intention 303 which is latent in the inner side called the depths of consciousness of a person who assigns a meaning to a certain code, that is, a structure of invisible logic 303', a series of codes cannot be univocally determined from words uttered as a requirement. That is, existence phenomenon called requirements of software and an existence phenomenon called a program cannot be grasped as a philosophical proposition.

Although the predicate logic is established in an explanation method by use of a mathematical equal symbol for the relationship among languages, the scheme of the meaning (intention) of language which humans wish to communicate and the scheme of human recognition of the meaning (intention) have traditionally been handled as an object in the fields of philosophy, psychology and linguistics. They were not regarded as the ones in the domain of natural science that can explain the casual sequence by using mathematical equal symbol such as equation, function (the relation between a function of the right side of equation and the subordinate variables of the left side of equation).

But, in the elucidation of a meaning, if it is regarded as not belongin g to the natural science category because a meaning is not an mass exi stence and therefore cannot be regulated objectively by physical properti es, then we must even negate a concept of time from natural sciences.

This is because a concept of time which is a base concept of natural sciences is not a mass existence. Reversibly, it is thought that we can not conclude in short-cut that we may as well exclude the concept of a meaning that is not a mass existence from natural sciences' subjects.

In order to correctly grasp a true state of existence, regardless of the s ubject being a mass existence or not, we need a thinking method of gr asping it by speculating a complementary set relationship between the a ctualized phenomenal existence and the invisible existence (meaning) wh ich is believed to be inevitably latent in the actualized phenomenal exis tence In this connection, philosopher Spinoza made the following definit ion of a concept of existence in his work "The Ethics".

The Ethics by Spinoza:

I. By THAT which is SELF-CAUSED, I mean that of which the essence involves existence, or that of which the nature is only conceivable as existent

II. A thing is called FINITE AFTER ITS KIND, when it can be limited by another thing of the same nature; for instance, a body is called finite because we always conceive another greater body. So, also, a thought is limited by thought, nor a thought by body.

III. By SUNSTANCE, I mean that which is in itself, and is conceived through itself; in other words, that of which a conception can be for med independently of any other conception.

IV. By ATTRIBUTE, I mean that which the intellect perceives as const ituting the essence of substance.

V. By MODE, I mean the modifications of substance, or that which exists in, and is conceived though, something other than itself.

Likewise, philosophy does not go beyond the solid conceptual definition of existence as above, whereas LYEE grasps a scheme of the formation of 'being' a meaning' that is invisible existence believed to be latent in the actualized phenomenal existence by means of structural semantics with quantum-mechanics applied, which is based on physical cognitive sensation. In this grasping, the set theory is placed as a foundation. However, this invention builds up a world without inconsistency, thereby theoretically avoiding Russell's 'irrationality' which is an inconsistency contained in the set theory as for the infinite domain.

As a result, conclusively speaking, the concept of 'existence' defined by Spinoza can be corresponded to as follows in LYEE:

Substance: Equivalent logical atom of Consciousness Unit-Link.
Attribute: Divergent dense set of consciousness Unit-Link.
Mode: Coupling of Cognitive Unit-Link

The following are discussed later, including Consciousness Unit-Link (a metonymic meaning), Cognitive Unit-Link (a metaphoric meaning), Equ ivalent Logical Atom, divergent dense set, Coupling.

The requirement Document and a series of codes, which are described by development and maintenance engineers after interpreting, inclusive o f guessing, the requirement items the software planner expressed with 1a nguage or documents, are visible existence, and they are phenomenal ex istence (normally called 'things') in the sense that they were embodied and actualized from a meaning (intention), which is an invisible existen ce. Further observation is made on this point.

As explained in Fig. 5, a reason why existence event can be existen ce phenomenon is as follows: It exists with a meaning by itself, that is, it has a meaning because it was true as a proposition, or the existenc e phenomenon 501 has been actualized as another existence phenomenon, it has a different meanings that 501 is a symbol recognized as 'triangl e' and that 503 is a 'cylindrical' composed of a substance with a mass.

Here, the existence of 501a has been considered as a philosophical c oncept which is "a minimum unit SELF-CAUSED that is an ultimate in divisible metaphysically possessing a fundamental nature for forming the univocal meaning latent in the existence phenomenon (for example, to be recognized that 501 is 'triangle' and that 503 is 'cylindrical'.), which is an origin enabling existence event to be existence event. (Herein a fter, it is called semantic quality as named by this invention.) To be n oted, a concept of this semantic quality is not 'infinite' but finite by ta king a premise that it is an ultimate indivisible minimum unit.

Here, an observation is made from the standpoint of set theory concer ning the grounds of argument of hypothesizing an ultimate element 501 a called semantic quality. As already mentioned, a 'set' is one whole U, and 'm' which composes the whole set (which is called an 'element' of the whole set U) can be defined and discriminated from each other, and it is an element of our intuition or speculation (that is, giving a m eaning) as defined by Kantor's 'transfinite set theory'. Therefore, it is considered quite natural to speculate that 'a nature to possess a meanin g', that is, 'semantic quality' comes down to the whole U in which ele ments of a set gathered in light of the definition of the 'transfinite set theory'.

As aforementioned, philosopher Spinoza defined such element as follow s in his work:

The Ethics by Spinoza:

I. By THAT which is SELF-CAUSED, I mean that of which the essenc e involves existence, or that of which the nature is only conceivable as existence.

Also, philosopher Wittgenstein named it 'simple symbol' or 'logical ato m'. And, it leads to that the gathering of such element can be perceiv ed by intuition or speculated, that is, recognized. After all, it leads to that it nightly means that it is a phenomenal existence possessing a m eaning. Accordingly, the rule of the set theory can be regarded as the exact cognitive theory of existence by itself.

A 'meaning' cited in the "structural principle of a meaning' stands on a thinking that this ultimate element 501a behaves with rules, and in conclusion it becomes a 'mode' as defined by Spinoza, and it is recognized by humans.

All substances, for example, concerning phenomenal existence 503, there are a world 505 of the substance composed of an elementary particle 505a which is an ultimate root of substances regulated by physics, and as well as a world 507 of the non-substance composed of 'attribute' which is called an ultimate-existence 'semantic quality' of a meaning accompanying the elementary particle 505a, and it is thought there must be a common structural principle on the level of the ultimate element 501a because either of them is an object to be recognized, that is, it falls onto a concept called 'existence', even if there are differences between them in that the former is concrete and the latter is non-concrete.
An outlook on the world explainable as a rule of concrete existence by quantum physics which is positioned at the ultimate level is an outloo k taking a premise of a elementary particle theory in order to explain a real state of quantum level that cannot be explained by Newton dyn amics. Details are referred by, for example, Schrodinger's wave equatio n, or Heisenberg's uncertainty principle. However, the wave function to accurately explain this world of quantum physics is still in a state of mix of confusion with various opinions of a school of Copenhagen, Lon don, etc. how to solve a difficult problem concerned with the handing of an 'observation, (that is, it is thought synonymous with 'giving a me aning' which is a base theme of this invention). Details of this concer n can be found in 'Spiritual Physics' authored by Teruaki Nakagomi, 'T he Century of Physics' by Fumitaka Sato, et al.
These opinions, after all, take a standpoint that a physical fundamental, i.e., an elementary particle, is positioned as an ultimate element of all of concrete existence, and as an elementary particle's behavior for exa mple electron are circulating around an atomic nucleus, and a true state ruling the circulation is a wave function. Also, based on this opinion, it is a normal phenomenon that this electron changes its track in the i nstant of certain observation (that is, cognition) to another track in the instant of the next observation (that is, cognition), in which sense the behavior surpasses the time and space. This is an understanding of a common opinion of quantum physics. These are, therefore, opinions b ringing in a elementary particle as the ultimate of concrete existent mat ter.
Fig. 6 is a conceptual block diagram to explain a way of thinking abou t grasping non-concrete existence. With LYEE, as shown by this diagr am, stands on an outlook on the world and adapts it to application that either concrete phenomenal existence 503 or non-concrete existence eve nt 501 is composed of quantum which rules the creation of semantic qu ality 501 called 'logical atom' 601 as an ultimate element of a concept called existence. Further to add, in Fig. 6, the system 505 in which e xistence can be recognized and the system 507 which forms a complem entary set relation with the phenomenal existence and cannot be recogni zed are called 'explicate order' and 'implicate order, respectively by the oretical physicist David Bohm.
In his work 'New Science and Science of Mind', it is advocated that an 'explicate order,' a world where objective cognition of observation/meas urement materializes from various factors of natural science of this 'uni verse space', does not exist alone by itself but co-exists forming a com plementary set relationship (fold in) with a world of 'implicate order' w hich is a world which is irrecognizable because of no time and space.
For this, therefore, semantic quality can be recognized and because a harmony has been established between the two systems as complementar y set relationship to each other, the 'explicate system' maintains its ord er.
Against this opinion, in a theory forming the backgrounds of this invention, either the 'explicate system' concrete existence 503 on the non-concrete existence 501 exists latent in the 'implicate system' 507 in which any existence phenomenon's semantic quality 501a has been folded in quantum-physically as a behavior of the logical atom 601 that is an elementary particle of a meaning. And, either the concrete existence 503 or the non-concrete existence 501 is regarded to be embodied as 'modes' as a result that the logical atom 601's entity formed a grouping and materialized an 'attribute' of semantic quality 501a, and this 'attribute' of the semantic quality formed a grouping. According to this thinking, all existences are contained in the 'implicate system'. Therefore, it ought to conclude that a 'correct solution of software (a solution to become true)' against a proposition of software ' is also folded in the 'implicate system' naturally.
A theory forming the backgrounds of this invention is an algorithm whi ch dictates that a quantum of logical atom 601 forms a grouping on th e basis of the set theory so as to avoid the Russell's 'irrationality', and elucidates a structural principle that advocates a certain subset conclud es to be phenomenal existence 501 and 503, and makes this structural principle into an equation. The equation is called 'associative equation'.
Details are referred later.
In LYEE, the equation is inversdy solved only within the phenomenal existence of software. The solution solved inversdy is a function whic h obtains a correct solution of software from the 'implicate system' for all software propositions (This function is called 'Scenario Function'. D etails are explained later. Further to add, the scenario of the Scenario Function was named after a meaning of a scenario in which existence p henomenon proceeds to be embodied.).
In this invention, variables of this function correspond to identifiers 4 01 which identify word that is a minimum unit of information possessin g a meaning in languages uttered as development requirement, and, by substituting word's identifier 401 for the variables, a series of words an d a series of codes of software are determined simultaneously (that is, not via the time and space), and, by simulatively reducing the codes de termined as above into the computer space which is regarded as a simu lated space of the 'implicate system', it succeeded in embody a required 'semantic quality' 501a.

That is, a relationship between the 'explicate system' 505 and the 'imp licate system' 507, which was elucidated by the theory forming this inv ention's backgrounds (A theory called by a title 'logical atomism' which was established by Fumio Negoro, an inventor of this invention) has b een established as a model called 'consciousness model', and its truenes s and practicability has been proven by having been actually applied to the phenomenal existence of software.

Also, this theory has made literally a philosophical concept, which was defined by Spinoza, established, by making it into an algorithm so as to realize reproduction in the field of science and engineering, and, against a natural law which is a premise of invention of all areas concerned with traditional software, this theory has realized a different and new natural law as a theory.

The base of bestowing a rule by emerging from idealism, in building up this theory, is mathematics, the set theory in particular.

Here, an observation is made from the standpoint of the set theory on the theoretical base of SELF-CAUSED given to the primitive Logical Atom 801. As already described, what form sets of elements is what are held by intuition or speculation, that is, what can be recognized, and after all they are existence phenomena possessing individual meanings.

The meaning of possessing individual meanings leads to that the Primitive Logical Atom shall inevitably assume a 'mission' ' SELF-CAUSED' to produce such existence phenomena by the sets of elements. The nature possessed by the mission can be decided and identified. This is a premise of the set theory. In mathematics that is a base of the natural rule, only figures are the element of intuition or speculation, and what can be decided and mutually discriminated include 'ordinal numbers (numbers expressing order )' and 'cardinal numbers (numbers expressing volume, for example, large/small, wide/narrow, long/short, heavy/light, bright/dark, many/few, etc.).

That is, mathematical figures are always assume these two natures, and never only one nature. In the present invention, this order is called the 'Deuteronomic order', and this 'volume' is called the 'meaning vital force'.

The definition for this SELF-CAUSED is nothing but what LYEE has mathematically regulated the SUBSTANCE that was defined by Spinoza in his concept of existence as follows:

The Ethics. By Spinoza

I. By THAT which is SELF-CAUSED, I mean that of which the essence involves existence, or that of which the nature is only conceivable as existent.

4.3.3 A method of avoiding the irrationality of the infinite set

Against the 'irrationality' of Bertrand Russell that says 'An infinite set, that is, the Whole, cannot be regulated as what it is, because an infinite set which takes an infinite set as an element is considered', therefore there is inconsistency in a set theory which infinite domain underlies', the theory of this invention advocates that the infinite domain indispensable to the set theory standpoint shall be satisfied in the Incomprehensible meaning-space, and on the other hand, in order to realize the theory, the set theory is applied into the sphere of the Idea meaning-space that is established by the projection of finite pieces of Logical Atoms from the infinite-domain Incomprehensible meaning-space. Accordingly, the logic concludes in the finite world to the end. That is, it shall grasp the infinite domain by the finite world.

Also, this theory thinks of the 'SELF-CAUSED which becomes the minimum unit that is ultimately indivisible from metaphysical viewpoint' is as the 'Logical Atom' (definition). The build-up of the theory based on the Logical Atom means that it does not fall into the concept of the infinitesimal rather it is handled as the finite world.

The concept of denotational infinity, which became inevitable as a result of this, is a convergence dense set composed of the 'Whole' of Cognitive Logical Atoms, and because it is convergent it is synonymous with 'the whole is uncertain', that is, the 'infinity' of the set theory. At the same time, the Equivalent Logical Atom, which is equivalent with the 'infinity', can be identified concretely (meaning not 'uncertain).

To the contrary, the concept of connotational infinity is a subset of the divergent dense set formed by finite pieces of Consciousness Logical Atoms, so it is 'limited' and synonymous with the 'finite'. At the same time, the Equivalent Logical Atom, which is equivalent with the subset, can be identified concretely (meaning not 'uncertain').

These connotational infinity and denotational infinity are equivalent each other via the Boundary Logical Atom, therefore an ideal world shall have been realized by avoiding the irrationality of 'the part and the whole are equivalent to each other'.

4.3.4 The structuring method of meaning

Here, an observation is again made on why the uncertainty has been bestowed to an entity becoming a meaning taking uncertainty as its essence.

A meaning is a result of sensing (in the human mind) existence phenomenon that is an object of sensing, and the means of recognition of what has been sensed are considered to be words.

The sensing behavior is naturally brought about by the life action of humans.

The humankind exists in the dynamic space in which time and space, so-called time-space, changes their state incessantly.

The uncertainty of a meaning is thought to be brought about, namely, by the dynamic space in which so-called time-space changes the state incessantly.

For the dynamic space , as clearly indicated by the meaning of the term, is a state in which incessant changes are continuing, and, the incessant changes make it impossible to definitely grasp the existence phenomenon itself in the space, and a state grasped is thought to be a mere afterimage.

In this invention, this dynamic space is called the Natural meaning-space 701. And, with this invention, a complementary space possessing a pre-condition which materializes all sorts of existence phenomena, that is, this Natural meaning-space 701, is placed to be the premise of the theorem of the set theory as a hypothesis. The complimentary space has no time-space because of being complementary, and because of no time-space, it is a static space in which changes of the state do not occur. It is thought that, because of being static, it ought to be the space in which all meanings can be univocally identified. In this invention, this static space is called the 'Consciousness meaning-space' 703 due to the definition that a meaning can be univocally perceived by the consciousness). this invention calls explicate system 505 as 'Natural meaning-space' 701 and implicate system 507 as 'Consciousness meaning-space'. A space 717, which intervenes the linear correspondence, or a complementary relation, between Natural meaning-space 701 and Consciousness meaning-space 703, is to be conclusively and inevitably composed of 'Definite meaning-space' 705 and 'Event meaning-space' 709 when the set theory is employed therein, which takes a premise of an elementary particle's existence of the meaning of logical atom 60 land uses it as an element of a set.

A space which becomes a base to establish Natural meaning-space 701, Consciousness meaning-space 703, and all above-mentioned spaces 705, 707 and 709 is called Idea meaning-space' 711. And, in the root of this Idea meaning-space exists is 'Incomprehensible meaning-space' 713 which contains an element of semantic quality 501a that is an element of all existences, and it concludes that it exists by forming a complementary set relationship with Idea meaning-space 711. Likewise, with a view of setting a concept of the incomprehensible meaning-space 713 and logical atom based on the set theory, LYEE can step out of ideology and can establish the algorithm, while Spinoza regulated an existence by means of ideology with a premise of 'God' in his work The Ethics.

Further to add, Definite meaning-space 705, Event meaning-space 707, Equivalence meaning-space 709 and Natural meaning-space 701 are generally called as 'Cognitive meaning-space' in certain cases. That is, Consciousness meaning-space 703 and Cognitive meaning-space 715 have a complementary relationship to each other.

Here, differences between meanings of an existence composed of substance with a mass and a meaning without a mass, based on their essence, are observed as follows:

(1)Contrary to matter being concrete existence, a meaning is non-concrete existence.

(2) While the former concludes as a mass set, the latter concludes itse lf only after a cognition is added, in human mind, to the quantum set of a meaning.

(3) While a substance is the one and only from the scientific point o f view, regardless of human cognition, a meaning causes differences in cognition of its sender, receiver and other person, therefore it i s not the one and only.

In order to further clarify concrete differences between the substance quantum theory as well as the ideological ontology taking 'God' as a pr emise in Spinoza's The Ethics and the axiomatic set theory of a meanin g of this invention, the major points of the theory forming the backgro unds of this invention are explained herein.

That is, a stage of the embodiment of 'semantic quality' is Natural meaning-space 701 in which a human can recognize existence phenomenon 510 as they are. When this theory is applied to an existence phenomenon of software, this Natural meaning-space 701 is, for example, a 'stage' where a development requirement composed of a set of words is uttered by the development requiring party as a phenomenon transmitted in language. In information processing system which is developed based on those words, a 'stage' is regarded as 'a medium including a screen et perceived directly by a human, and via this screen the word's semantic quality is embodied as data code, and as a result of human's recognition in mind about what was embodied as an existence event, it becomes a meaning. A meaning, viewed from the point that it is a result recognized in the mind, is neither the one and only nor objective.

Herein, the existence phenomenon 501, 503 exist in two meaning-spaces, Natural meaning-space 701 being the stage of embodiment and meanin g-space 717 being the stage of ruling embodiment process. These two s paces 701 and 717 are generally called Cognitive meaning-space 615, as aforementioned. And, software 719 is what has realized on a compute r the space 717 which rules a process of embodying word's 'semantic q uality'.

This theory concludes that the space 717 which rules this embodying pr ocess consists of Definite meaning-space 705, Event meaning-space 707 and Equivalence meaning-space 709. Conclusively speaking, when this theory is applied to the domain of software engineering, it is regulated that: Definite meaning-space 705 correspond to WO2 pallet in this inv ention, the event mean-space 707 to WO3 pallet in this invention, and Equivalence meaning-space 709 to WO4 pallet in this invention. Detail s of these are explained later. Further to add, the 'pallet' is meant by a 'flatcar to carry semantic quality (data code)'. That is, it is meant by a field where the subject obtaining semantic quality (called 'Unit-Link '. Details are explained later.) exists.

The origins both of the ruling of embodiment of existence phenomenon in this Cognitire meaning-space 715 and of the existence phenomenon being the ruling's inevitable conclusion, that is, semantic quality 501a of every existence phenomena 501, 503 is what logical atom 601, the ult imate quantum, gathers to form a set based on a rule, and folded into a Consciousness meaning-space 703 established thereabouts. A rule of this 'folding in' is called 'Unit-Link' by this theory. This word 'folding in' was borrowed from a term used in physics. Details of 'Unit-Link' are explained later.

Further to add, a base space to establish this Cognitive meaning-space 715 and Consciousness meaning-space 703 is called Idea meaning-space 711, as already mentioned.

In order for this Idea meaning-space 711 to exist, existence of a space which has a complementary relationship with this space 711 is needed, from the axiom of the set theory, and this space is called Incomprehensive meaning-space 713, as already mentioned.

4.3.5 The establishment method of algorithm

Now, a meaning is a result of perception (in the human mind) against an existence phenomenon which is an object of perception. In other words, a meaning is 'an invisible existence' in light of it being a result of perception (in the human mind). In light of being 'an invisible existence', it also means that there is no cognition-level dependence between one meaning and the other meaning and that they are independent with each other. Notwithstanding that it is an invisible existence on the cognition level, why does a human living body actualize it as a speech and behavior?

A means of recognizing what has been perceived is actualized as vocal utterance and descriptive document by means of words and becomes existence phenomenon.

It is thought that the differentials between a perception against the existence phenomenon to actualize via one word and a perception against the existence phenomenon to actualize via the word adjoining the existence phenomenon is exactly a meaning as a result of perception. The differentials can be recognized (that is, the cognitive result corresponds to the afterimage) as differentials only because of being affected by a dynamic action of the time-space, and humans, the subject living body of the cognition, also exist on the coordinates of the other time-spaces and grasp the meaning of existence phenomenon as a vector from the coordinates, therefore it is thought that a meaning shall assume uncertainty.

Since the time-space does not materialize in Consciousness meaning-space, however, differentials between semantic quality actualizing via a word and semantic quality actualizing via the adjoining word, that is, a meaning, shall be identified originally as a univocal thing. This is a background theory of this invention.

For example, when a party wants to realize software by saying "We want to grasp such a data.", the fact that the first utterance of 'such a data' was actualized to be followed by the next-adjoining utterance of 'want to grasp' leads to that it has been determined by an invisible logic latent in differentials between the logic which determined the beginning word and the logic which determined the adjoining word. The present invention also has it that the very invisible logic is ought to become a cognition, that is, a meaning, unique to the party requiring software production. The first-uttered words 'such a data' are what have been actualized from the semantic quality of Consciousness Unit-Link which corresponds to the words, and the next-uttered words "want to grasp' are also what have been actualized from the semantic quality from Consciousness Unit-Link which corresponds to the words.

Therefore, although it is not predictable in principle what concrete phrase becomes the beginning utterance and what concrete phrase becomes the adjoining utterance, semantic quality of Consciousness Unit-Link always exist in the regions corresponding to the beginning region of the word uttered first and the next region of the word uttered next. Thus, if the individual regions are duplicated reversibly into the Consciousness meaning-space, thereby defining their semantic quality, followed by the semantic quality in those regions embodied from the Consciousness meaning-space into the Natural meaning-space, then, the univocal requirement (It may as well be called a meaning) of the party requiring software production ought to be satisfied.

It is thought that this embodiment logic itself is ought to become a solution to software, that is, equivalent to correct software. The word is semantic quality itself which has embodied in the region, and a meaning can be rephrased by a logic that embodies semantic quality into a region corresponding to that region.

Consequently, the determination of a meaning used for regulating software requirement in Natural meaning-space shall be univocally implemented by duplicating semantic quality of individual words into the Consciousness meaning-space 703 to define them, then by embodying semantic quality of the words from the Consciousness meaning-space 703 into the Natural meaning-space 701. It is thought that this embodying logic is nothing but a solution to software, that is, a correct-solution program (that can be univocally determined).

The requirement of software as well as programs are languages which direct computers to perform prescribed functionality. The functionality is thought to mean to create data code by process logic into the data field (The state in which a data field arrangement has been defined is called 'data structure', and its structured form is generally called 'Definitive'.), whose arrangement has been defined in accordance with the nature of media through Screen, Printouts, Message and File (media) and, subsequently, to actualize the result via media.

That is, the minimum unit of element to materialize cognition of what is the embodying content purposed by software, that is, a word, shall mean to be an identifier that distinguishes the data field on the Definitive from the other data fields.

Accordingly, a correct-solution program to realize the functionality shall be obtained by grasping data field on the Definitive, that is, semantic quality of every word, in the Consciousness meaning-space 703 and embodying it into the data field.

Fig. 37 is a conceptual diagram for explaining the univocal semantic quality 501 in the Consciousness meaning-space 703 of every word, which is the origin of a meaning, by using a concept of the vector of a meaning.

As shown by the diagram, the univocal semantic quality 501a in Consciousness meaning-space 703 of every word shall be grasped through the following:

(i) the logical action (3701) to induce semantic quality of word on Consciousness meaning-space 703 viewed from Definite meaning-space 705,
(ii) the logical action (3703) to induce semantic quality of word on Consciousness meaning-space 703 viewed from Event meaning-space 707,
(iii) the logical action (3705) to induce semantic quality of word on Consciousness meaning-space 703 viewed from Equivalent meaning-space 709,
XII. the logical action (3702) to synthesize semantic quality induced through (i) and (ii),
XIII. the logical action (3704) to synthesize the synthesized semantic qualities in (iv) and semantic quality induced in (iii).

The Tense Control Vector is, in Fig. 37, is a template, that is, a function to determine the individual logical actions as programs composed of a series of codes as follows:

III. → W02 Pallet's Homogeneity Vector (3701)
IV. → W03 Pallet's Homogeneity Vector (3703),
V. → W04 Pallet's Homogeneity Vector (3705),
VI. → W03 Pallet's Duplication Vector (3702),
XIV. → W04 Pallet's Duplication Vector (3704).

And, the variable of the function is word's identifier only, so the Tense Control Vector becomes universal in any fields of application with no particulars of industry, business, programming language and the mounting environment.

4.3.6 A Method of Reduction of Meaning Structure (1)

Fig. 38 is a diagram for explaining concept of Reduction.
As shown in the figure, a set of Logical actions to capture semantic quality of every word in Definite meaning-space 705 is materialized as Tense Control Vector, and it is collected by the unit of Definite meaning-space 705 and developed into the main memory. This is called W02 Pallet 3801. As aforementioned, the template, that is, the function to determine the 'collecting' logical actions as a program composed of a series of codes is called W02 Pallet Function.

Also, a set of logical actions to capture semantic quality of every word in Event meaning-space 707 is materialized as Tense Control Vector, and it is collected by the unit of Event meaning-space 707 and developed into the main memory. This is called W03 Pallet. As aforementioned, the template, that is, the function to determine the 'collecting' logical actions as a program composed of a series of codes is called W03 Pallet Function.

In addition, a set of logical actions to capture semantic quality of every word in Equivalent meaning-space 709 is materialized as Tense Control Vector, and it is collected by the unit of Equivalent meaning-space 709 and developed into the main memory. This is called W04 Pallet. As aforementioned, the template, that is, the function to determine the 'collecting' logical actions as a program composed of a series of codes is called W04 Pallet Function.

Programs actualized in a series of codes called Tense Control Vector (3801a, 3803a, 3005a) are arranged on each Pallet 3801, 3803 and 3805, respectively, and Reduced onto computer 3807. If those Pallets 3801, 3803 and 3805 are operated in the prescribed order, the desired functionality is autonomously embodied via media such as Screen, Printouts, as aforementioned (Fig. 157 up to Fig. 163). The template, that is, function, which determines the logical action of operating in the prescribed order as a program composed of a series of codes is called 'Pallet Chain Function 3809'

Fig. 39 is a conceptual diagram for explaining the Homogeneity Map.

The information processing system shall actualize the desired functionality by using a variety of Definitive. So, W02 Pallet and W04 Pallet are prepared for every Definitive and the in-between of each Pallet is connected in accordance with the rule of this theory. A drawing resulting thereabouts is a Homogeneity Map shown in Fig. 39.

A requirement content of the software-production requiring party actualizes as an utterance. What satisfies the actualized utterance is the materialization of software. Therefore, words involved must be placed onto a media, for example, Screen, that can be recognized visually and directly. The Pallets which directly correspond to the medium Screen are W02 Pallet 3903 and W04 Pallet 3901. So, W02 Pallet 3903 and W04 Pallet 3901 are to be prepared in pair for every identifier (3907) of the Definitive of Screen.

Also, the process of embodying semantic quality in existence providence takes the sequence of Definite Unit-Link (W02 Pallet) → Event Unit-Link (W03 Pallet) → Equivalent Unit-Link (W04 Pallet) → Embodiment (Screen). The cognitive result of what the semantic quality has embodied into in such a sequence is a meaning. The use and operation of information processing system means the behaviour by taking a momentum of a meaning recognized.

Hereupon, specifying the first Definite Unit-Link is not possible in principle. The inability to specify also the first Definite Unit-Link eventually means the inability of determination of Event Unit-Link to operate next. That is, the first Unit-Link belongs to the region only God knows.

On the other hand, a certain Screen has embodied as a result of the unit-link only God knows, therefore, as aforementioned, the W04 Pallet 3901 which corresponds to the Screen can be specified.

Thereupon, in order to be able to identify W04 Pallet 3901 which corresponds to the first-embodying Screen as the first-operating Pallet on the Screen, it is inscribed in the heading of Screen. Then, Definite Unit-Link (W02 Pallet 3903) which receives operation resulting from the cognition of semantic quality embodied on the Screen is inscribed next to W04 Pallet 3901. Thereafter, in order to realize the sequence of Definite Unit-Link (W02 Pallet 3903) → Event Unit-Link (W03 Pallet 3903) → Equivalent Unit-Link (W04 Pallet 3901) → Embodiment (Screen), each of Pallets is connected by line in the diagram. This is, namely, a Homogeneity Map.

Accordingly, the Homogeneity Map is a diagram representation of the existence providence or the Scenario Function. As the Scenario Function is the function to determine a software, the Homogeneity Map can be rephrased by the design diagram to determine a software.

<Method to determine requirement>

By walking through (generally called 'Walk-Through' by computer terminology) Homogeneity Map along with the route indicated by the logical set which is regulated by the right side of the Scenario Function, and by having identifiers of words and process logic adequately satisfied so as to materialize the regulating condition of the logical set, a correct-solution (inclusive of necessary words, semantic quality to be induced to the words, data structure with words arranged and Definitive to contain the data structure) can be determined mechanically by the rule possessed by the Scenario Function, without involving the penetration of arbitrariness.

Further to add, semantic quality induced to a word is, when the word is regarded as Equivalent Logical Atom of Consciousness Unit-Link, produced by the materialization of an approximate equivalent relation which is established between the semantic space diameters possessed by the Equivalent Logical Atom and the semantic space diameter of the divergent dense set 1301. Hereupon, the Equivalent Logical Atom is called a 'Self", and the Logical Atom consisting of the divergent dense set 1301 is called a 'Given'. That is, as meant by the word 'equivalent', the inevitable materialization of the state represented as 'Self word's semantic quality' = 'Given word's semantic quality' shall satisfy the Providence of Existence.

For example, the semantic quality of a word 'A' belonging to a Screen shall be determined as a requirement by simply substituting the semantic quality of a word 'A' into File. This is a rule of the Scenario Function. Also, for example, the semantic quality of a word 'A' belonging to the Screen shall be determined as a requirement by substituting an operational result of the other word (in principle, the total sum of the semantic space diameter of the Logical Atom located at the odd number positions). This is a rule of the Scenario Function. Then, if the Given word does not exist, the rule of the Scenario Function shall not be satisfied. Thereupon, such Given word shall be made belonging newly to a certain Screen and File. Likewise, a correct-solution requirement and data structure will be determined mechanically without involving the penetration of arbitrariness.

4.3.7 A Method of Reduction of Meaning Structure (2)

<Command Action Vector>

Based on the Providence of Existence which is a background principle to realize this invention, the origin embodied as an existence phenomenon is a semantic quality of Consciousness Unit-Link. The semantic quality is subject to being already established before it is embodied into Natural meaning-space 701. That is, the 'semantic quality' of the Consciousness Unit-Link corresponds to the 'memory' of our human awareness/cognition of the meaning of the object existence phenomenon.

In the implementation of this so-called memory in the computer space, for example, when it is implemented by storing data code into the data field of the main memory, the data field of magnetic recording media, etc., in light of the fact that the Pallet is what has been developed on the main memory, so in the information processing system having reduced to imitate the Providence of Existence into the computer space, the data field on magnetic recording media being treated as a copy of Consciousness meaning-space 703, the followings are required:

(i) Logical action (3701) to induce semantic quality of word on Consciousness meaning-space 703 of the data field of magnetic recording media viewed from Definite meaning-space 705,
(ii) Logical action (3703) to induce semantic quality of word on Consciousness meaning-space 703 of the data field of magnetic recording media viewed from Event meaning-space 707,
(iii) Logical action (3705) to induce semantic quality of word on Consciousness meaning-space 703 of the data field of magnetic recording media viewed from Equivalent meaning-space 709.

The logical structure to realize it is the aforementioned Command Action Vector, and particularly when inducing semantic quality of the word on the Consciousness meaning-space 703, which is the data field on magnetic recording media, it is prepared in each Pallet as a "reference-type-Command Action Vector'

Hereupon, an observation is made concerning what position is taken based on the Providence of Existence by a new data code that is created based on the input data code of user's intention and its subsequent data code, when using information processing system.

The input data actualized as user's intention is also what a semantic quality of Consciousness Unit-Link has been actualized by the original Providence of Existence. Therefore, this concern also must be handled as an already-existent memory in the information processing system reduced so as to simulate the Providence of Existence in the computer space. Otherwise, it shall not satisfy the necessary and sufficient condition of Providence of Existence. That is, by using the Command Action Vector concerned with Registration, the data code must be memorized into the data field on a magnetic recording media. And, the Platte ruling it must be Event Unit-Link 1417 which is directly connected with Consciousness Unit-Link, that is, W03 Pallet 3905.

<Data Structure>

The data field on a magnetic recording media corresponds to the existing place of semantic quality of the Consciousness Unit-Link cited by this theory. The Consciousness Unit-Link is, according to this theory, all univocal and independent because of the relation between Divergent Dense Set 1301 and its Equivalent Logical Atom 1307. In the sense that it is the univocal and independent as well, there shall be neither contour of 'group' nor a concept of 'a certain common part' therein. Unless it exists uniformly (that is, uniform distribution. It is called 'divergent structure' by this theory.), it shall not mean that the Providence of Existence has been simulated. And, semantic quality assumed by Consciousness Unit-Link actualizes by being succeeded by Natural meaning-space 701 as it is.

In other words, a word's semantic quality actualizing in the Natural meaning-space 701 means to be a word's semantic quality in the Consciousness meaning-space 703 as it is. For this reason, the determination of the set of data on recording media, that is, File design and DB (database) design becomes, as far as the present invention is concerned, a method complying with the Providence of Existence by simply accommodating it onto the data field of magnetic recording media as a field composed of identifiers which identify the data field on media such as Screen and File, which imitates the natural meaning-space 701.

<Routing Action Vector> <Work Action Vector>

The Regulation of the Providence of Existence creates a new unit-link of pieces of involution of the number of Logical Atoms consisting of Event Unit-Link 1417. The unit-link is Equivalent Unit-Link 1419. The Equivalent Logical Atom concerned with the Equivalent Unit-Link 1419 take over the Equivalent Logical Atom concerned with the Event Unit-Link 1417.

However, the number of the Logical Atom consisting of the Event Unit-Link 1417 cannot actually be specified because the Event meaning-space 709 is a space invisible from the Natural meaning-space 701. Thereupon, it is necessary to prepare in advance a logical structure existent already as the requiring-party's requirement of software production, which shall realize qualifying the number of Logical Atom as well as qualifying the condition of Regulation for creating Unit-Link of pieces of involution of the number of such qualified Logical Atom, when the Providence of Existence is Reduced into the computer space.
And, resulted from the condition is a program to realize a logical structure that specifies which Equivalent Unit-link 1419 among these pieces of involution, which is called Routing Action Vector and a program to realize logic that rules the judgment, which is called Work Action Vector.

<Action Vectors for Structure Adjustment>

In the Providence of Existence, there happens the disintegration of Unit-Link due to the Deuteronomy of the new Logical Atom. Also, semantic quality happens to be disintegrated. On the other hand, it is necessary to prepare in advance a logical structure with action for this disintegration, because the Reduction of semantic quality has been assigned to the data field on the memory.
In the Providence of Existence, when new Logical Atoms are transferred from the Incomprehensible meaning-space, the already-existing condition of the formation of Unit-Links, that is, the condition of materializing the permutation as well as the duplicate permutaiton, will change. Consequently, Unit-Links, already existent, happen to be disintegrated. The disintegration of the Unit-Link means that semantic quality is disintegrated as well. On the other hand, when the Providence of Existence is Reduced so as to imitate it into the computer space, semantic quality is data code created in the data field on the main memory.
Also, the Deuteronomy corresponds to the operation of both Imput of data code and Key Operation (or directive command) via Screen. The happening of the disintegration of semantic quality by the Deuteronomy means that the Providence of Existence shall not be satisfied if there is no action of disintegrating data code created in the data field on the main memory. This action contains initialization of the data field on the main memory and the setting of conditions of materializing the Unit-Link. A program which realizes the logical structure to perform such actions is called 'Action Vectors for Structure Adjustment'.
This action contains initialization of the data field on the main memory and the setting of conditions of materializing the Unit-Link. A program which realizes the logical structure to perform such actions is called 'Action Vectors for Structure Adjustment'.

4.3.8 Determination Procedure of Software

In this invention, software to be produced (requirements and source codes) is determined by the method called a functional solution that is Scenario Function. In this connection, the equation is generally expressed as follows:

$$Y = F(x)$$

F (x) is called a function. The equation is what can determine its solution as the only one by putting concrete things into the independent variable x.
In contrast, the Scenario Function is generally expressed as follows:

$$T0 = \Phi 0\ (+ \{\Phi p\ \{\qquad , L2(k, i), P2(j)\}\ \}k$$

$$+ \Phi p\ \{ Y3(k, i), L3(k, i), P3(j), T1(f)\}$$

$$+ \{\Phi p\ \{Y4(k, i), L4(k, i), P4(j)\}\}\ k)$$

Independent variables required to solve this function are only those as follows: the Definitive identifier (k) that identifies media with which information can visually and directly be recognized by humans who use information processing system, such as Screen and Printouts; and the Word identifier (I) that identifies data field belonging to the media. That is, File and DB, which are identified by the Definitive identifier (f), are not independent variables but become a solution determined univocally.
The production procedure of concrete solution of the Scenario Function becomes as follows, and this Scenario Function is mounted as a program composed of a series of codes onto software processing apparatus and it may as well be realized as a functionality of software creation system shown by Fig. 134.

(i) To extract words uttered as development requirement, and they are pasted into Screen and Printouts. Then, identifiers of words and Screen are attached. These identifiers are independent variables of Scenario Function.

Identifiers determined in this manner may as well be registered in software creation system shown by Fig. 135 and up to Fig. 138.

(ii) By using the identifier (k, i), Scenario Function is solved. And, the result of solving Scenario Function is expressed in diagram as Homogeneity Map.

At this point, solutions which were determined are as follows:

II. Pallet identifier
III. Action operator of Routing Action Vector
IV. Definitive identifier (k) and Word identifier (i) concerned with File, DB, etc.
V.New Definitive identifier (k) and Word identifier (i) which have been drawn so as to satisfy the rule of Scenario Function. Identifiers determined in this manner may as well be registered in software creation system shown by Fig. 135 and up to Fig. 138.

(iii) Various identifiers obtained as a solution by creating the Homogeneity Map are listed in the Word Table and temporarily determined as independent variables. This Word Table is treated as a table inside the software creation system and may as well have been registered in the software creation system shown by Fig. 144 and up to Fig. 148.

(iv) To substitute various identifiers listed in Word Table into functions such as Duplication Vector, Homogeneity Vector and Action Vector, and solve these functions and obtain solutions concerned with Duplication Vector, Homogeneity Vector and Action Vector. The solution may as well be realized as a functionality of software creation system as shown by Fig. 148 and up to Fig. 151.

Solutions determined at this point are as follows:

VI. Programs composed of a series of codes concerned with Duplication Vector, Homogeneity Vector and Action vector
VII. Requirements concerned with various identifiers
VIII. New Definitive identifier (k) and Word identifier (i) drawn so as to satisfy the rule of Scenario Function, and action-operator independent variables.

As to these new Definitive identifier (k), Word identifier (i) and action-operator independent variables, steps from (1) to (iv) are to be repeated.

(v) To substitute various identifiers listed in the Word Table per Pallet which is a solution of the creation of Homogeneity Map (iii) into independent variables of Pallet Function and solve the function so as to obtain a solution concerned with Pallet Function. This solution may as well be realized as a functionality of software creation system shown by Fig. 148 and up to Fig. 151.

Solutions determined at this point are programs composed of a series of codes concerned with Pallets.

(vi) To substitute Pallets which are a solution of Pallet Function (iv) into independent variables of Pallet Chain Function which performs action of 'forming unit-link' of each Pallet so as to perform the prescribed functionality, and solve the function. Then to obtain a solution concerned with the Pallet Cahin Function. This solution may as well be realized as a functionality of software creation system shown by Fig. 148 and up to Fig. 151.

Solutions determined at this point are

IX. Programs composed of a series of codes concerned with the Pallet Chain Function
X. The completion of software.

4.3.9 Synchronous Processing Method for Software

Features of software processing method based on this invention are to accomplish synchronous process. The synchronous process means as follows: Data code of Self Word is created only by data-link in order for programs of every word identifier 401 to match consistency (that is, by autonomous judgment regardless of the sequence of process) and, as a result, the development requiring party's invisible intention, which was uttered with the very words as of development requirement, is to be satisfied like direct communication from mind to mind. This is the fundamental logical structure unique to this invention. This logical structure is the scheme of our consciousness itself as aforementioned (Fig. 157 and up to Fig. 163).

Upon such a determination and production of software, the structures involved are only those structures shown by Fig. 26 and up to Fig. 35 and they are all the same for any words, and by simply bundling them into the three kinds of Pallet regardless of the order software can be determined and produced.

4.3.10 Various Management Methods of Software

Constituent components of software based on the fundamental logical structure unique to this invention are all independent for every word without reliance on each other. Because of being independent, the independence is also applied all to the development, maintenance and resource management without dependence, so an overall management never becomes complicated, while enabling the parallel management system.

Also, the structure can be realized by simply bundling the only structures shown in Fig. 26 and up to Fig. 35, regardless of words, into the three kinds of Pallet without the need of considering their order. Therefore, it leads to the understanding that the fundamental logical structure unique to this invention substitutes the management by itself. That is, it also leads to the understanding that human management shall not be required, thus enabling the management in the same way as of the management of mechanical structures. Accordingly, by utilizing the development and management assist system shown by Fig. 134 and up to Fig. 151, the purpose of management can be accomplished only by managing product components, not like the management of humans in the traditional methods.

4.3.11 Business Method of Software Development

Fig. 36 indicates the business method of utilizing this software development approach as a business tool, which advocates the fundamental logical structure unique to this invention.

As shown by the Fig., a development request is received via e-mail in the form of the minimum information composed of natural language words (electronic information), which was uttered as an development intention. As a result, the development work thereafter is able to be realize development centered on click-and-click operation, as inferred from the software creation system (Fig. 134 and up to Fig. 151) which was shown in the aforementioned software development procedure.

That is, in Lyee, a democratic process, a mutual consent, between the development requiring party and the development work force, which could be rephrased by an evil custom or a necessary evil, (Strictly speaking, this process should have been unnecessary when viewed from the realization of software in its original sense.), can be made unnecessary. That is, in Lyee, an operation expression which induces natural patent data called words that are contained in the development requirement uttered by the development requiring party shall be simply accepted as they are (as uttered), and the whole work step thereafter is implemented as a matter of course. This is obviously an epoch-making method viewed from the merits of business.

4.3.12 Logical Structure of the Parallel Processor, BPR and Inference Mechanism

Viewed from the background principle to materialize the present invention, all existence phenomenon shall become what was embodied from semantic quality in accordance with the Providence of Existence. In case of the existence phenomenal existent as a meaning of both the requirement and the product based on it, that is, when the existence phenomenon of language, which is non-physical structure, is treated as an object, the means and method of obtaining semantic quality situated at the intention, meaning and origin to be embodied can be obtained through the application of the present application.

As typical examples of the existence phenomenon existent as a meaning of both the requirement and the product based on it, for example, software itself, BPR (Business Process Revolution), Inference Mechanism, and the logical structure of computer itself can be mentioned.

<Logical Structure of the Parallel Processor>

The elucidation of a way of the existence of software existence phenomenon is also a motive of the present invention, and software is naturally covered by the range of the claim of the present application. If a system can be realized which faithfully simulates the Providence of Existence, that is, a background principle for establishing the present application's software structure, programs made by the present application will actualize further effects.

As already aforementioned, the process actualizing semantic quality based on this theory will materialize in the space without a concept of the time-space, that is, Definite meaning-space 705, Event meaning-space 707 and Equivalent meaning-space 709. And, semantic quality of Consciousness Unit-Link is the univocal and independent without mutual dependence. Also, it never interferes with one another. Each semantic quality induces semantic quality of Consciousness Unit-Link by data-link, which is parallel and synchronous, in each space, and it is duplicated between each space and materializes in Natural meaning-space 701. What has been so materialized is recognized by humans and becomes a meaning, thereby being processed as information.

Because of this, it is possible to materialize a unit, which is realized onto physical-existence processing apparatus, as prescribed by the logical structure as regulated by every component for materializing the Scenario Function. For this, it is possible to shorten the process time required for sequential processing into the one-tenth of those for the word that is a process subject unit. This means that it overthrows a thinking of the architecture of parallel or super computers, thereby bringing about significant improvements.

<BPR (Business Process Revolution)>

The fundamental business goal is how to efficiently increase sales. The efficiency of sales can be accomplished by giving priority and focusing on what is needed by the market, grasping it exactly and providing it without losing time. 'What is needed by the market' herein means information on what product or what service are needed, and this information is, namely, what becomes a meaning after all. In order to 'supply what is needed without losing time', it is necessary to exactly grasp rational information to be transferred to the production line as well the information of the manufacturing status of the production line. That is, information, or what becomes a meaning, will determine success or failure of business.

Goals of BPR are thought of as how to set up this information and how to systematically organize the flow of information. Conclusively speaking based on this theory, the information needed by the market and the preparation of the information into the scheme accorded in the goals of business are regarded as existence phenomenon, and the origin of their roots ought to already exist as a semantic quality of Consciousness Unit-Link. Hence, it is possible to make BPR realistic and effective by utilizing semantic quality of the Consciousness Unit-Link along with the Homogeneity Map cited by the present invention.

<Inference Mechanism>

A concept of 'inference' can be defined as creating a new meaning based on know-how when already-known and prescribed know-how (what becomes a meaning) is given.

Software is a meaning if viewed by the person who determines it, but, if viewed from the side of computer operating with such software, it is merely an enumeration of codes and it cannot be a 'meaning' defined by the present invention with a concept containing latent and invisible logic. Because, speaking of the principle of Neumann-type computer, the CPU simply implements the repetition of movements such as transfer, copy, calculation, and comparison of data codes between internal registers and particular memory addressed by codes, and there is no room thereabouts for the computer to interpret invisible logic based on the actualized codes. The interpretation is a deed that can be performed by humans only. Therefore, in principle, a concept of the inference mechanism cannot be established by software.

Hereupon, an observation is made on the point about from the viewpoints of the codes and a phenomenon embodied by the codes. If the 'already-known and prescribed know-how' is rephrased by 'a phenomenon in which the codes are subject to embodiment is already known.', the process logic of every word will never materialize the whole logic by means of its autonomous operation and data-link as far as codes created by the traditional methods are concerned.

Accordingly, the phenomenon produced by the operation of the codes will never create a new meaning, thereby surpassing the prescribed know-how.

On the other hand, in the logical structure based on the present invention, the processing logic of every word is prescribed and already-known, but the process logic is an independent logic of data-link only and does data-link autonomously. That is, the already-known and prescribed know-how is only the processing logic of every word, and a total phenomenon resulted from the balanced operation of process logic prepared for every word is neither already-known nor prescribed. That is, when the number of words is N, that is, the number of prescribed know-how (that is, what becomes a meaning.) is N, the number of a meaning to embody as a result of the operation of a set formed by the words becomes N pieces of W02 Pallet, N pieces of W03 Pallet and $N^3$ pieces which was formed by the Unit-Linking of N pieces of W04 Pallet. That is, the $N^3/N=N^2$ pieces of new meanings shall be created. This means that it is possible to realize an inference mechanism that could not be realized by the traditional inference scheme, and it shall bring remarkable effect into the field of artificial intelligence and simulation.

4.4 Various Factors of Subject Matters of the present invention

4.4.1 Homogeneity Map

<Goals of invention possessed by Homogeneity Map>

The Homogeneity Map is the only software requirement document of definition based on the present invention, which possesses a rule that enables the minimization of the 'invisible logic' (that is, the uncertainty inevitably latent in the action of giving a meaning by humans) thought to embody existence phenomenon which is composed of the set of words manifested as a software development requirement .

By using information obtained by creating this Homogeneity Map (the information is equivalent to all components consisting of a software product) as a parameter, and when it is applied to the logical structure based on this invention, all kinds of software can be univocally determined, thereby dissolving the uncertainty. Such means of technology falls onto the goal of the present invention.

<The meaning of the uncertainty is the minimum>

The requirement of creating a software in the configuration containing a computer to operate software to be produced and information media which intervene directly for humans to use it, for example, an output device to print data, is to define data to embody via the media.

To define data to embody means nothing but to regulate the contents of data to embody as well as the embodying conditions (that is, giving a meaning) into the data field which corresponds to words thought to be belonging to the media and the minimum unit for giving a meaning.

For giving a meaning, in the traditional methods, phenomena already actualized or to be actualized are traced with personality, and a meaning is given to the relation of traced phenomena, thereby making up a design document. This technique was implemented all the time.

On the other hand, with the present invention, a result of the development requiring party's recognition is grasped as a phenomenon that was manifested as a development requirement composed of the set of words, and the phenomenon is grasped as what has embodied via the aforementioned media, with no tracing of the relation between phenomena at all, and no arbitrariness as well (that is, it is thought that words have embodied on the media). The 'Homogeneity Map is determined by the minimum information of the media and the identifier to identify words only (the former is called 'Definitive Identifier', and the latter 'Word Identifier'.), and only by this diagram software can be univocally determined, so it may as well be said the uncertainty is the minimum.

<Various factors and theoretical base of Homogeneity Map with the minimum uncertainty>

This invention goes upstream to the point of roots of giving a meaning (the result of giving a meaning appears as words) so as to recognize the phenomenon (also called 'existence phenomenon') as it is, the domain of which is generally called 'the depths of consciousness', or 'mind' or 'consciousness', and it advocates the exact process (called by the present invention as the 'Providence of Existence') during which semantic quality embodies into Natural meaning-space 701 irreversibly and given a meaning, then becomes existence event (that is, embodied as recognizable words) by taking its origin in what will become a meaning of word in the domain of the depths of consciousness, that is, the space called by the present invention as Consciousness meaning-space 703, that is, the meaning structure that creates semantic quality 501a as the univocal thing (this meaning structure is called 'Consciousness Unit-Link'). Consequently, the present invention is not only software itself but also the scheme leading to the determination of software.

The rule of this process is placed on the base of the set theory, and what was grasped theoretically by avoiding the Russell's irrationality contained in the set theory concerned with the concept of infinity is a theoretical expression called by the present invention as 'Association Equation. That is, as aforementioned, the Association Equation is expressed by

$$rj=Tij(ri).$$

Hereupon, the dependant variable rj is semantic quality in Natural meaning-space 701 (also called 'semantic space diameter').

The independent variable ri is semantic quality in Consciousness meaning-space 703 (also called 'semantic space diameter').

The Tij is called 'Space Duplication Function'.

Also, the subscript j is the identifier that identifies words which are thought to be the minimum unit of the means for recognizing semantic quality in Natural meaning-space 701, and the subscript i is the identifier at the time of considering the word's identifier j as the Deuteronomy order possessed by Equivalent Logical Atom 1307 of the Consciousness Unit-Link 1309.

This Association Equation is originally invisible to humans who belong to Natural meaning-space 701, in the sense that it takes, as its independent variable, the Deuteronomy order i of Equivalent Logical Atom 1307 concerned with Consciousness Unit-Link 1309 in Consciousness meaning-space 703 which is a theoretical space and the semantic space diameter ri of the Consciousness Unit-Link 1309. Accordingly, it is impossible to directly specify the independent variable of Consciousness Space 703 on this equation, and it had to be treated as abstract variable.

Thereupon, it is necessary to grasp semantic quality of Consciousness meaning-space 703 with independent variable that can be specified in Natural meaning-space 701 by realizing the correspondence of Consciousness meaning-space 703 and Natural meaning-space 701 by using an artificially designed spatial simulation. The function obtained through this way of thinking is the 'Scenario Function' that can be indicated by the following expression. That is,

$$T0 = \Phi 0\ (+\ \{\Phi p\ \{\quad ,\ L2(k,\ i)\ ,\ P2(j)\}\ \}k$$

$$+\ \Phi p\ \{\ Y3(k,\ i)\ ,\ L3(k,\ i)\ ,\ P3(j),\ T1(f)\}$$

$$+\ \{\Phi p\ \{Y4(k,\ i)\ ,\ L4(k,\ i)\ ,\ P4(j)\}\}\ k)$$

At the stage of this Scenario Function, however, it merely provides the platform to univocally determine what becomes a meaning of words contained in software development requirement without arbitrariness entry. In reality, it is necessary to operate the Scenario Function of inducing semantic quality determined likewise on the device of computer and embody the functionality that satisfies the intention of the development requiring party.

To operate the Scenario Function in the space of computer (as aforementioned) is called 'Reduction' by the present invention.

The corrected Scenario Function which contains the condition of materializing this Reduction is inscribed as follows. That is,

$$T0 = \Phi 0\ (+\ \{\Phi p\ \{\quad ,\ L2(k,\ i)\ ,\ P2(j)\}\ \}k$$

$$+\ \Phi p\ \{\ Y3(k,\ i)\ ,\ L3(k,\ i)\ ,\ P3(j),\ T1(f)\}$$

$$+\ \{\Phi p\ \{Y4(k,\ i)\ ,\ L4(k,\ i)\ ,\ P4(j)\}\}\ k)$$

$$T1(f) = \Phi 1\ (\{\Phi p\ (rf,\ 2)\ \{\quad ,\ L2(r,\ i)\ ,\ P2(r,\ j)\ ,\ P2(j)\}\}\ r$$

$$+\ \Phi p\ (rf,\ 3)\ \{Y3(r,\ i)\ ,\ L3(r,\ i)\ ,\ L3(f,\ i)\ ,\ P3(j)\}$$

$$+\ \{\Phi p\ (fr,\ 4)\ \{Y3(f,\ i)\ ,\ L4(f,\ j)\ ,\ P4(f,\ j)\ ,\ P4(j)\ \}\}\ f)$$

Symbols in the parenthesis of this function are independent variables which grasp a meaning as univocal, and concretely, one is word identifier (i), another is identifier of the word's belonging to a medium, and the other is action operator (j).

And, the representation of this Scenario Function in diagram in accordance with the rule mentioned below is a software definition document called 'Homogeneity Map' which is one of the subject matters of the present application of invention.

Hereupon, the Φ0 ({Φp { } } k + Φp { } + {Φp { }} k) of the Scenario Function corresponds to the logical structure of the Idea Rule in the Providence of Existence. The Idea Rule is to set the first-Deuterolonomized Logical Atom seated, to establish divergent and convergent structures, and, based on these structures, to establish Definite meaning-space 705, then Event meaning-space 707, and Equivalent meaning-space as the last, to deliver semantic quality 501a concerned with Consciousness Unit-Link 1309 and embody it into Natural meaning-space 701. What was so embodied becomes the cause for materializing a meaning of the data code that has been actualized in the data field which is identified by the Word Identifier belonging to the medium of Screen. This action is grasped as a program product composed of a series of codes that are grasped by the spatial simulation or it is grasped as Logical Atom of the processing apparatus. It is called 'Pallet Chain Function' as mentioned before.

This Pallet Chain Function is also a function to determine software univocally by taking elements inside the parenthesis ( ) as independent variables. That is, independent variables are plural W02 Pallets concerned with plural Definitives which are identified by the Screen identifier k, W04 Pallet and the only W03 Pallet. The '+' means vector synthesis of elements inside the '( )', specifically, activations of programs of Pallets in sequence. Also, the '(' means the Reduction of the logic which places the Deuteronomized Logical Atom as seated and establishes divergent structure and convergent structure. It corresponds to the Receive function of Screen data. Also, the ')' means reduction of the logic which makes semantic quality become existence phenomenon as a Natural Unit-Link by harmonization. It corresponds to the SEND function of data to Screen.

The '{}' means Reduction of the logic which establish all of Definite meaning-space 705, then Event meaning-space 707 and Equivalent meaning-space 709, on the basis of the divergent and convergent structures. All the programs of Pallets become the object for activation, therefore it is known that the Pallet Chain Function is only one piece.

Fig. 40 is an example for explaining the inscription rule of the Homogeneity Map.

In this Fig. The Pallet Chain Function's inscription on the Homogeneity Map is indicated by the connecting line to combine all the Pallets (4001).

Also, the Φp {,,} corresponds to the logical structures of Convergent Rule and Contingent Rule in the Providence of Existence., and at the same time, it is a product program composed of a series of codes that have grasped such actions in the spatial simulation as the activation by Contingent Rule of Cognitive Rule which materializes Definite Unit-Link 1413 and the embodiment of phenomenal existence by creating Secondary Convergent Dense Set 1405 which materializes the Contingent Rule. It is the Logical Atom of the processing apparatus as well and called 'Pallet Function' as aforementioned.

This Pallet Function is also a function to determine software with a singular meaning by taking elements inside the '{,,}' as independent variable. That is, it assumes a role of logic for putting together Duplication Vector, Homogeneity Vector and Action Vector, thereby making into Pallets, which belong to Definitive k, r or f and are identified by both Word Identifier i and Action Operator k,

Subscripts of Duplication Vector, Homogeneity Vector and Action Vector respectively correspond to as follows: '2' to Definite Space 703, '3' to Event Space 707 and '4' to Equivalent Space 709, and they correspond to the classification of Pallet as well.

The inscription of 'Pallet Function' onto Homogeneity Map is as follows, in Fig. 40: Φp {2} is indicated by a box presentation as W02 Pallet of Screen of identifier k (4003); Φp {3} is indicated by a box presentation as W03Pallet (4005); and Φp {4} is indicated by a box presentation as W04 Pallet of Screen of identifier k (4007).

The L2(k, i) assumes a role of action of the Cognitive Rule which establishes Definite Unit-Link that gives a clue to embody existence phenomenon by the disclosure to Cognitive Rule activated by the first Contingent Rule in the providence of existence and Consciousness Unit-Link in which the 'Kuh' is established, and the related Reduction is a program product composed of a series of codes that have grasped semantic quality slice of Consciousness Unit-Link from Definite Unit-Link in a spatial simulation, and at the same time it is Logical Atom of a processing apparatus.

This W02 Homogeneity Vector is also a function to determine software with a singular meaning by taking elements inside the '()' as independent variable. That is, with a singular meaning, it grasps semantic quality of data code in the data field which belongs to Definitive Identifier k, which identifies a medium of Screen, and is identified by Word Identifier i. To grasp a slice of Consciousness Unit-Link's semantic quality from Definite Unit-Link 1413means to grasp a slice of semantic quality of the Consciousness Unit-Link in which the 'Kuh' is established.

The 'Consciousness Unit-Link' in which the 'Kuh' is established is equivalent to a subset of Logical Atoms existent in the set unit of divergent dense set, so it takes a state of'The whole is a part and the part is the whole.' In other words, it is 'a cloudless state.' That is, it is a state that can conclude a perfect process.

A state that can conclude a perfect process in information processing system without detecting exceptional cases means that data code has been defined in the data field that belongs to Definitive Identifier k to identify a medium of Screen and is identified by Word Identifier and that semantic quality has not been defined yet, or the semantic quality has been defined or it has attribute as exactly defined. An examination shall be implemented on semantic quality satisfying such conditions, i.e., data attribute.

The inscription of 'W02 Homogeneity Vector' on Homogeneity Map is as follows: By designating 'c' to Word Identifier which functions as operational keys to operate the Screen and directive commands, only L2(k, c) is inscribed with a line branching from W02 Pallet of the identifier k of Screen to W03 Pallet or W04 Pallet 4009 of (Fig. 40).

In this connection, this 'branching' logic assumes by Homogeneity Vector identified by L2(k, c) or Action Vector of the route identified by P2(j).

Y3(k, i) corresponds to an action that reduces Cognitive Rule, which is activated by the second Contingent Rule 1404 in the providence of existence and Definite Unit-Link 1413, which has already materialized by the Cognitive Rule, as semantic quality which is revealed into the Consciousness Unit-Link 1309 in which the 'Kuh' is established, and in the spatial simulation it is a program product composed of a series of codes which duplicate Equivalent Logical Atom 1307 of Consciousness Unit-Link 1309, which has determined Definite Unit-Link 1413, as Equivalent Logical Atom 1307, which determines Event Unit-Link 1417. It is Logical Atom of a processing apparatus, too.

This W03 Duplication Vector is also a function which determines software with a singular meaning by taking elements inside the '()'as independent variable. That is, semantic quality is duplicated with a singular meaning as for the data code in the data field on W02 Pallet which belongs to Definitive Identifier k identifying a medium of Screen and is identified by Word Identifier i.

The clarifying inscription of W03 Duplication Vector dare not be made on Homogeneity Map, and it is treated as latent in the box presentation of W02 Pallet. Further to add, The Pallet to which W03 Duplication Vector belongs is distinguished from the W04P Pallet to which W03 Homogeneity Vector L3(k, i) belongs as the W02G Pallet inside W03 Pallet.

L3(k, i) corresponds to the action to create semantic quality which was associated from the Consciousness Unit-Link, in which the 'Kuh' is established, by Cognitive Rule activated by the third Contingent Rule in the providence of existence and Event Unit-Link 1417 materialized by the Cognitive Rule and also corresponds to the Equivalent Unit-Link which materializes by the breakup and Regulation of semantic quality of Consciousness Unit-Link. In the spatial simulation, it is a program product composed of a series of codes which grasp semantic quality slice of the Consciousness Unit-Link, in which the 'Kuh' is established, from Event Unit-Link 1417, and it is Logical Atom of a processing apparatus, too.

This W03 Homogeneity Vector is also a function which determines software with a singular meaning by taking elements inside the '( )'as independent variable. That is, with a singular meaning, 'semantic quality' of data code is created in the data field on W03 Pallet which belongs to Definitive Identifier k and is identified by Word Identifier i.

To grasp a slice of semantic quality 501a of Consciousness Unit-Link 1309 from Event Unit-Link 1417 means to grasp semantic quality of the Consciousness Unit-Link, in which the 'Kuh' is established, as a slice viewed from Event meaning-space 709. The 'Consciousness Unit-Link,' in which the 'Kuh' is established, means a state of 'The whole is a part and the part is the whole.' 'The whole is a part and the part is the whole.' also means 'Self = the others. ' That is, it eventually means to 'recognize the self as all equivalent to the others.' That is, it is a state allowing to 'substitute the others for the self.' Realistically, it is an action of creation performed by substitution or calculation of data code. And, this shall be the Consciousness Unit-Link, in which the 'Kuh' is established, that is, 'The whole is a part and the part is the whole', so by targeting all media belonging to the system it is necessary to prepare it concerning all of Word Identifier i, which belongs to identifiers k, f, and r that identifies it.

The clarifying inscription of 'W03 Homogeneity Vector' is not made on Homogeneity Map, and it is treated as latent in the box presentation of 'W03 Pallet.'

The P3(j) assumes the following three kinds of action.

The first one is 'Command Action Vector' possessing functionality of reference, registration and modification of data code on the File, when Consciousness Unit-Link's semantic quality is Reduced as data code onto media of File. On Homogeneity Map Diagram, File of File identifier r or f is inscribed at the bottom of W03 Pallet, then the File and 'W03 Pallet' are connected by using an arrow (4011 of Fig. 40).

Assuming that the T1 Scenario Function controls the providence of existence that handles semantic quality of the word which identifies the field recording data code on media of File, this Command Action Vector shall assume the activation of the T1 Scenario Function.

The second one is 'Structural Action Vector' which is an Action Vector that substitutes the Unit-Link's disintegration accompanied by the Logical Atom's Deuteronomy, and it is 'Structural Action Vector' controlling the action of initialization of the concerned area.

The clarifying inscription is not made on Homogeneity Map, and it is treated as latent in the box presentation of 'W03 Pallet.'

The third one is a Routing Action Vector which substitutes the action to determine Equivalent Unit-Link 1419 resulting from the Regulating action from Event Unit-Link 1417 to Equivalent Unit-Link 1419. And, this determines a route to the next W04 Pallet in accordance with the result of both Command Action Vector and Homogeneity Vector.

The inscription onto Homogeneity Map is made by the branching line that branches from W03 Pallet to W04 Pallet (4013 of Fig. 40).

The T1(f) is a logical structure which induces semantic quality by repeating process of plural Files and plural data codes, when Consciousness Unit-Link's semantic quality is reduced as data code onto media of File. The T1(f) is Scenario Function of the case input/output media of the information targeted in software are File, and in this instance Pallet Chain Function is Φ1 and expressed as follows. That is,

$$T1(f) = \Phi 1\ (\{\Phi p(rf,2)\ \{\qquad , L2(r, i), P2(r,j), P2(j)\}\}\ r$$

$$+\ \Phi p\ (rf, 3)\ \{Y3(r, i)\ , L3(r, i), L3(f, i)\ , P3(j)\}$$

+ {Φp (fr, 4) {Y3(f, i) , L4(f, j) , P4(f, j) , P4(j) }} f)

Hereupon, the r is File identifier for reference, f is File identifier for registration and modification, and j is an operator of Action Vector for structural adjustment and route setting as well.

The inscription onto Homogeneity Map is the same as in the case of T0 (4015 of Fig. 40).

The Y4(k, i) controls an action that corresponds to the premise to materialize Equivalent Unit-Link 1419, which is a state Unit-Link, by the Coupling of Equivalent Unit-Link 1419 in the providence of existence. In the spatial simulation, it is a program product composed of a series of codes of the meaning structure that duplicates Consciousness Unit-Link's semantic quality grasped from Definite Unit-Link, upon grasping it as Consciousness Unit-Link's significance viewed from Equivalent Unit-Link 1419, as Equivalent Logical Atoms of Equivalent Unit-Link, or the meaning structure that duplicates Consciousness Unit-Link's semantic quality grasped from Event Unit-Link 1417 as Equivalent Logical Atoms of Equivalent Unit-Link viewed from Equivalent Unit-Link 1419. It is a Logical Atom of a processing apparatus as well.

This W04 Homogeneity Vector is also a function to determine software with a singular meaning by taking elements inside the '()' as independent variable. That is, with a singular meaning, it duplicates semantic quality of data code in the data field on W02 Pallet which belongs to Definitive Identifier k, which identifies a medium of Screen, and is identified by Word Identifier i or semantic quality of data code in the data field on W03 Pallet.

The clarifying inscription of W04 Duplication Vector dare not be made on Homogeneity Map, and it is treated as latent in the box presentation of W04 Pallet.

The L4(k, i) corresponds to the premise of Unitization of the Coupled result of the semantic quality grasped by Event Unit-Link 1417 which was associated from the Consciousness Unit-Link, in which the 'Kuh' is established, by Equivalent Unit-Link 1419 in the providence of existence. In the spatial simulation, it is a program product composed of a series of codes of the meaning structure grasping a slice of Consciousness Unit-Link from Equivalent Unit-Link 1419. It is a Logical Atom of processing apparatus as well.

This W04 Homogeneity Vector is also a function to determine software with a singular meaning by taking elements inside the '()' as independent variable. That is, with a singular meaning, it converts semantic quality of data code in the data field on W04 Pallet which belongs to Definitive Identifier k and is identified by Word Identifier i into a form of embodiment.

To grasp a semantic quality slice of Consciousness Unit-Link, in which the 'Kuh' is established, from Equivalent Unit-Link 1419 means to grasp a slice of the Consciousness Unit-Link as a slice viewed Event meaning-space 709. Realistically, it is a logical structure which realizes an action of edit in accordance with the prescribed embodiment rule against data code.

The clarifying inscription of W04 Homogeneity Vector is not made on Homogeneity Map, and it is treated as latent in the box presentation of W04 Pallet.

The P4(j,4), when the rule of concretely expressing semantic quality of Consciousness Unit-Link is regulated and registered into the medium of File, corresponds to 'Command Action Vector' that makes reference to the File, that is, the data code embodiment rule on the error message file, and to 'Routing Action Vector' that designates the embodiment destination medium of Screen.

For inscribing onto Homogeneity Map, as to Command Action Vector, File, which corresponds to becomes File Identifier to be adopted, is inscribed at the bottom of W04 Pallet of Screen that is identifier k, and an arrow is inscribed from the File to W04 Pallet (4017 of Fig. 40). As to Routing Action Vector, the medium of the embodiment destination of Screen is inscribed between W04 Pallet and W02 Pallet, or it may as well be omitted as self-explanatory,

The Homogeneity Map of Fig. 40 is an inscription of only the contents concerned with minimum information of only identifiers that identify media, but what is meant by this diagram is Scenario Function itself. This Scenario Function is a logical structure to induce semantic quality 501a of the word that can be identified as the univocal in Consciousness meaning-space 703, and all elements of the Scenario Function shall be contained in the Homogeneity Map as aforementioned. Hence, this Homogeneity Map may as well mean that it inevitably eliminates the uncertainty so as to enable the determination of software as univocal.

Rules possessed by the Scenario Function T0's Homogeneity Map are listed as follows:

(1) The creation unit is based on the 'Menu Item' unit on the menu screen.

When the menu configuration is not determined, it takes the unit of a state that can be specified by Scenario Function as univocal (that is, a state of materialization of synchronization. Details are explained later) (4019).

(2) The Kind of the heading Pallet to be displayed on the very left upper part

W04 Pallet is placed (4007) which is concerned with Identifier K1 that identifies the first-displayed screen by selecting menu items on the menu screen.

<Reason>

The process sequence in the traditional methods is generally input process at first, then conversion process, and output process as last. This is a functional order based on such imaginations advocating data input by humans as Descartes' 'Cogito ergo sum' (that is, an idea that 'We think (only to that effect, it is TRUE). Therefore, we (our behaviors) exist.') are the start of things.
On the other hand, in this invention, the origin of semantic quality concerned with words which are cognitive means exists not in humans doing data input but in semantic quality of Consciousness meaning-space 703, and by taking it as a start point humans are aware of the semantic quality. And, a structure with which humans determine the will of data input as a result of recognizing what he has been aware of shall already be existent thereabouts. That is, this invention advocates an imagination that the start of things is W04 Pallet that corresponds to an output process.
For this reason, in this invention, W04 Pallet is placed as the first-appearing program.

(3) Sequence of operation and the inscribing position of each Pallet

The operational sequence of Pallets inscribed in Homogeneity Map is described in the followings.
The heading is W04 Pallet by the rule as mentioned herein above (4007). By setting this W04 Pallet to be in operation, the Tense Control Vector (Duplication Vector and Homogeneity Vector) mounted in the Pallet edits data code indicated in the filed which is identified by the Word Identifier. If messages of prompt, alert, etc. are required, it edits messages by making reference to Message File e4021. In addition, the Routing Action Vector designates Screen Identifier which embodies edited data code.
By receiving the edit processing result, Pallet Chain Function 4001 sends the data code to the designated Screen, and, as a result, the edit data is displayed on the display screen. A human operator individually recognizes the data code displayed on the Screen and individually implements data code input and the pushdown of operational keys (or directive commands) by operating the keyboard or mouse, via Screen. By taking this operation as a clue, Pallet Chain Function 4001 receives input data and pushed-down operational keys (or directive commands) and activates W02 Pallet 4003.
By the operation of this W02 Pallet 4003, the Tense Control Vector (Homogeneity Vector) mounted in the Pallet implements attribute examination of data code existing in the field of Screen identified by the word identifier concerning the data field in case words are not operational keys (or directive commands). On the other hand, when words of the 'Tense Control Vector' (Homogeneity Vector) mounted in the Pallet are operational keys (or directive commands), it notifies Pallet Chain Function 4001 of the Pallet identifier to be activated next (called 'the Next Pallet Identifier') that has been defined to the operational key (or directive command key) of Screen identified by the Word Identifier.
Next, by receiving a processing result of the W02 Pallet 4003, the Pallet Chain Function 4001 activates a Pallet corresponding to the 'Next Pallet Identifier' that was notified from W02 Pallet 4003. The Next Pallet identifier to be accepted hereabouts is either W03 Pallet 4005 or W04 Pallet which corresponds to self Screen or non-self Screen. In this connection, it is called 'Continuous Unit-Link' (4023) to activate W04 Pallet which corresponds to non-self Screen.
Now, the embodiment of semantic quality into Natural meaning-space 701, concerned with Consciousness Unit-Link in the providence of existence, takes steps of Definite Unit-Link 1413→ Revelation 1415 → Consciousness Unit-Link → Association → Event Unit-Link 1417 → Regulation → Equivalent Unit-Link 1419, thus it must be, as a constant state, W02 Pallet 4003→W03 Pallet 4005→ W04 Pallet 4007. However, Continuous Unit-Link 4023 is a process of W02 Pallet 4027→W04 Pallet 4007 without going through W03 pallet 4025, so it violates the providence of existence. The reason for that there is such a process is that it is a simulation environment called Reduction.
That is, the Reduction of the providence of existence onto the computer space means to accept the ego of humans. In the operation by the ego, there can be an attempt to aim synchronization with Consciousness Unit-Link by the next Screen without doing the synchronization with Consciousness Unit-Link for the moment. The Unit-Link to accept such an operation is Continuous Unit-Link.
Now, by setting this W03 Pallet to be in operation, the Tense Control Vector (Duplication Vector and Homogeneity Vector) creates data code in the data area on the main memory which is identified by the Word Identifier. Also, the Action Vector mounted in the Pallet implements data operation with File and DB (database) if it is a Command Action Vector. If it is a Word Action Vector, examinations are implemented on whether the data code created by the Tense Control Vector satisfies the work requirement or not.
If it is a Structural Adjustment Action Vector, the area initialization is implemented.
If it is a Routing Action Vector, a Pallet identifier to be activated next (called the Next Pallet Identifier), which accords in a result of the Tense Control Vector and the other Action Vectors, is notified to Pallet Chain Function 4001. The Next Pallet Identifier accepted by the Routing Action Vector is W04 Pallet which corresponds to self Screen or non-self Screen. To activate W04 Pallet which corresponds to self Screen is called 'Restart Chain' 4012, and to activate W04 Pallet which corresponds to new non-self Screen is called 'Duplicate Chain' 4013, and to activate W04 Pallet which corresponds to already-activated non-self Screen is called 'Multiplex Chain' 4014. The Unit-Link between Pallets is limited to the above four kinds.

The inscription in Homogeneity Map is made so as to realize the above movements.

Above-mentioned are rules of inscribing Homogeneity Map (Scenario Function T0) that corresponds to a requirement definition so as to decide software as the univocal which uses a medium of Screen as a main body of information processing system. When it is necessary to induce semantic quality by processing in repetition plural Files and plural data records in W03 Pallet of this Homogeneity Map, the requirement of that part can be defined in the Homogeneity Map of Scenario Function T1(f).

Rules possessed by the Homogeneity Map of Scenario Function T1 are listed below.

(4) The creation unit is the final object File (File 4029 of the F1 identifier of Fig. 40).
(5) As the heading Pallet to be displayed on the very left upper part, W04 Pallet 4031 is placed which is composed of Equivalent Unit-Link 1419 controlling the embodiment of the final object File, and a direction that controls registration and modification into the final object File 4029 is connected to the bottom of the Pallet by using an arrow to File (4033).
(6) Sequence of operation and the inscribing position of each Pallet

The heading is W04 Pallet 4031 concerned with the final object File according to the rule of the foregoing paragraph. By the operation of this W04 Pallet 4031, Tense Control Vector (Homogeneity Vector) mounted in the Pallet does data editing which embodies into the field of File identified by the Word Identifier on the basis of the data code in the data field identified by the Word Identifier existing in W03 Pallet 4035.

By receiving the editing process result, the Command Action Vector transfers data code to File 4029 (4033). Thereafter, the Structural Adjustment Action Vector does initialization of the area, then the Routing Action Vector notifies Pallet Chain Function 4001 of the 'next -activating Pallet Identifier'. Pallet Chain Function 4001 sets the Pallet of the Next Pallet Identifier to be in operation, which was informed by W04 Pallet 4031. The Next Pallet Identifier accepted herein is W02 Pallet 4037 only.

By the operation of W02 Pallet 4037, the Command Action Vector mounted in the Pallet makes reference to Reference File 4039. Next, Tense Control Vector (Homogeneity Vector) starts to operate, receives data code existing in the filed of Reference File 4039 which is identified by the Word Identifier, and implements attribute examination. Next, the Routing Action Vector notifies Pallet Chain Function 4001 of the 'next-activating Pallet Identifier (called the Next Pallet Identifier').

Next, by receiving the process result of W02 Pallet 4037, Pallet Chain Function 4001 activates the Pallet of the Next Pallet Identifier which was informed by W02 Pallet 4037. The Next Pallet Identifier accepted herein is W03 Pallet 4041 when reference data is existent and when reference data is not existent, it is W04 Pallet concerned with either final object File or Intermediary Object File. Hereupon, to set W04 Pallet to be in operation is called 'Continuos Chain'.

By the operation of this W03 Pallet 4041, the Tense Control Vector (Homogeneity Vector) mounted in the Pallet creates data in the data area identified by the Word Identifier. Also, as to the Action Vector mounted in the Pallet, the Structural Adjustment Action Vector implements the adjustment of the structure (Practically, it is a mixed-flag process. Explained later in detail.).

Next, the Routing Action Vector notifies Pallet Chain Function 4001 of the "next-activating Pallet Identifier (called 'Next Pallet Identifier')". The Next Pallet Identifier accepted herein is W04 Pallet which is directly connected with W02 Pallet 4037 existing just before, or the heading W04 Pallet or W04 Pallet concerned with Intermediary Object File.

Hereupon, to operate W04 Pallet which is directly connected with W02 Pallet 4037 existing just before is called 'Restart Chain', and to operate the heading W04 Pallet is called 'Multiplex Chain,' and to operate W04 Pallet corresponding to Intermediary Object Files is called 'Duplicate Chain.'

In Homogeneity Map, the inscription is made so as to materialize the above-mentioned movements.

<Elimination of Uncertainty>

Goals of the Homogeneity Map include to inevitably dissolve uncertainty so as to 'determine any software as univocal.' In the present invention, this work is called 'Walk-Through'. As already explained, the Homogeneity Map is a graphical presentation of Scenario Function, so all elements to materialize Scenario Function must be treated as having been included in the Homogeneity Map even if they are not indicated in the clarifying inscription. That is, all of conditions described under the <various factors of Homogeneity Map so as to minimize uncertainty> shall be latent therein. In this latent to operate W04 Pallet corresponding to Intermediary Object File is called 'Duplicate state, the Walk-Through process, which traces each element and the element's condition so as to realize the inscribed Homogeneity Map, shall inevitably and theoretically dissolve inconsistency (that is, 'uncertainty'). That is, software shall be determined as univocal in the state without involving personal ability.

4.4.2 Various factors of 'Tense Control Vector'

<Goals of the invention possessing 'Tense Control Vector'>

The Tense Control Vector minimizes the uncertainty by means of the

Homogeneity Map which is the only software requirement definition document based on this invention that possesses a rule enabling the minimization of the 'invisible logic' (that is, the uncertainty inevitably latent in the action of giving a meaning by humans) that is thought to embody existence phenomenon composed of the set of words indicated as software development requirement. And, it is a logical structure composed of a series of codes which realizes necessary and sufficient conditions so as to satisfy the providence of existence which is the theoretical base to justify the Homogeneity Map. To satisfy various points of the theoretical base possessed by this Tense Control Vector means the univocal determination of the relation between all software's requirements and programs composed of a series of codes, and consequently the elimination of uncertainty is inevitably realized, which is the goal of the present invention.

<The meaning of the logical structure which enables the inevitable elimination of uncertainty>

The uncertainty has been eliminated from existence phenomenon composed of a requirement and codes means that, for example, the grounds of argument for determining a series of codes leading to 1 statement can be recognized by anyone with a single meaning. To possess the grounds of argument for the recognition with a single meaning by anyone means that the grounds of argument was not determined personally, but based on a principle or a providence. The Tense Control Vector, as detailed in the paragraph concerned with the 'background principle', has been made up as a program that has turned a logical structure possessed by the providence of existence into codes as they are. Therefore, it may as well be said that it is a logical structure by itself that can be realized based on the theoretical base which can be recognized by anyone with a single meaning.

<Theoretical base of the Tense Control Vector's logical structure that enables the inevitable elimination of uncertainty>

Fig. 41 is a conceptual presentation of the scheme with which a significance is recognized as a meaning by humans. In Fig. 41, as aforementioned, the present invention goes back to the domain normally called the depths of consciousness that is thought to be positioned in the root of giving a meaning which recognizes existence phenomenon as it is, and, by originating in the domain of the depths of consciousness, that is, what becomes a meaning of words in Consciousness meaning-space 703, that is, the meaning structure (the equivalent relation between Divergent Dense Structure and Equivalent Logical Atom) that creates what is semantic quality 410 as univocal, the semantic quality shall embody 4103 irreversibly into existence phenomenon and reach for being given a meaning (that is, recognized 4105). - This invention exactly advocates this process (called the 'Providence of Existence' by the present invention) as software itself and as a scheme itself, at the same time, which leads up to the determination of a software.

What has theoretically grasped the rule of this process with the set theory as a base, thereby avoiding the Russell's irrationality contained in the set theory relating to the concept of infinity, is a theoretical expression of this invention which is called 'Associative Equation'.

That is, the Association Equation is given by the following as aforementioned:
Rj=Tiji(ri). Hereupon,

The dependent variable rj is semantic quality in Natural Space 701 (also called 'significant space diameter').

The independent variable ri is semantic quality in Consciousness meaning-space 703 (also called 'semantic space diameter'), and Tij is called 'Space Duplication Function'.

Also, the subscript j is an identifier to identify words which are thought to be a minimum unit of a means to recognize semantic quality in Natural meaning-space 701, and the subscript i is an identifier of the Deuteronomy order of the Equivalent Logical Atom 1307 of Consciousness Unit-Link 1309 taking the word's identifier j.

This Associative Equation is originally invisible to humans, who belong to Natural meaning-space 701, because it takes the Deuteronomy order i of the Equivalent Logical Atom 1307 concerned with Consciousness Unit-Link 1309 in the theoretical Consciousness meaning-space 703 and the semantic space diameter ri of the Consciousness Unit-Link 1309 as independent variables. Accordingly, it is impossible to directly specify the independent variable of Consciousness meaning-space 703 and cannot help but handle as abstract variable.

From this reason, the relation between Consciousness meaning-space 703 and Natural meaning-space 701 is corresponded by using an artificially-devised special simulation, and it is necessary to grasp semantic quality of Consciousness meaning-space 703 by means of an independent variable that can be specified in Natural meaning-space 701. A function which could be obtained in this manner is 'Scenario Function" and it is represented by the following expression.

That is,

$$T0 = \Phi 0\ (+ \{\Phi p\ \{\quad , L2(k, i)\ , P2(j)\}\ \}k$$

$$+\ \Phi p\{Y3(k,i)\ , L3(k, i)\ , P3(j), T1(f)\}$$

$$+\ \{\Phi p\ \{Y4(k, i)\ , L4(k, i)\ , P4(j)\}\}\ k)$$

At the stage of this Scenario Function, however, we can only determine what becomes a meaning of words contained in software development requirement as univocal without involving arbitrariness. In reality, this Scenario Function which induces semantic quality determined in this way must be operated on a physical-existence computer and it is necessary to embody the functionality to satisfy development requiring party's intention.

To make Scenario Function be operable in the computer equipment space is called by this invention as the 'Reduction' to the computer space.

A Scenario Function corrected by containing conditions to realize this reduction can be expressed as follows. That is,

$$T0 = \Phi 0\ (+ \{\Phi p\ \{\quad , L2(k, i)\ , P2(j)\}\ \}k$$

$$+\ \Phi p\ \{\ Y3(k, i)\ , L3(k, i)\ , P3(j), T1(f)\}$$

$$+\ \{\Phi p\ \{Y4(k, i)\ , L4(k, i)\ , P4(j)\}\}\ k)$$

$$T1(f) = \Phi 1\ (\{\Phi p\ (rf, 2)\ \{\quad , L2(r, i)\ , P2(r,j)\ , P2\{j)\}\ \}r$$

$$+\ \Phi p\ (rf, 3)\ \{Y3(r, i)\ , L3(r, i)\ , L3(f, i)\ , P3(j)\}$$

$$+\ \{\Phi p\ (fr, 4)\ \{Y3(f, i)\ , L4(f, i)\ , P4(f, j)\ , P4(j)\}\}$$

Symbols inside parentheses of the function are independent variables which grasp a meaning as univocal, and specifically one of them is word identifier (i), and the other one is identifier of media to which words belong (k, r and f) and the other one is action operator (j).

And, an existence phenomenon of data code which appears in the data field of media identified by these identifiers becomes semantic quality ri for which univocal semantic quality ri4101 accompanied by the Consciousness Unit-Link equivalent to those identifiers has embodied into Natural meaning-space 701 through the action of the providence of existence 4103. And it means that human's cognitive result of the semantic quality ri is rj4105.

Also, components consisting of the right side of Scenario Function such as L2(k, i), Y3(k, i), L3(k, i), Y4(k, i), and L4(k, i) contain identifier i which indicates the Deuteronomy Order i, and each of the components corresponds to conditions and logical structure that materialize the providence of existence such as Definite Unit-Link 1413, Revelation 1415, Association 1416, Event Unit-Link 1417, Regulation, Equivalent Unit-Link 1419 and Coupling, which induce semantic quality ri accompanied by Consciousness Unit-Link 1309 concerned with Equivalent Logical Atom taking the Deuteronomy Order i. At the same time, they are program products as a matter of Reduction, and Logical Atoms as well. Also, it is also a function to determine those various factors with a singular meaning.

That is, the result of solving this function by substituting concrete identifiers for the independent variables k and i becomes process logic possessing program identifiers L2(k, i), Y3(k, i), L3(k, i), Y4(k, i), and L4(k, i) that are identified by the word identifier i.

Programs (process logic) of this invention which realize the logical structure of such function as codes are called as follows, respectively:

XI. L2(k, i): Homogeneity Vector mounting on W02 Pallet
XII. Y3(k, i): Duplication Vector mounting on W03 (W02G) Pallet

XIII. L3(k, i): Homogeneity Vector mounting on W03 (W04P)
XIV. Y4(k, i): Duplication Vector mounting on W04 Pallet
XV. L4(k, i): Homogeneity Vector mounting on W04 Pallet,

They are generally called 'Tense Control Vector' (as aforementioned).

Also, data field on the memory address identified by Word Identifier i and Duplication Vector i and Homogeneity Vector i, identified by Word Identifier i, are made into a couple and gathered for a unit of Definitive Identifier (as aforementioned), and so gathered are called 'W02 Pallet', W03 Pallet, and 'W04 Pallet', respectively.

Hereinafter, various features possessed by such 'Tense Control Vector' of the present invention are explained.

Explained first is a Tense Control Vector that can determine logical structure as a solution of function.

Fig. 42 is a diagram for explaining that Homogeneity Vector L3(k, i) mounted on W03 Pallet is a function in case of obtaining prescribed functionality by Reducing Scenario Function into the computer space. Independent variable k in the Scenario Function is a media identifier which identifies such media as Screen, Printouts and File in information processing system, which is one of Natural meaning-space 701, and independent variable i is an identifier of data field that can be specified by placing it on the media. An existence Phenomenon of data code which appears in the data field identified by this identifier is nothing but what has induced semantic quality ri assumed by Consciousness Unit-Link, as already mentioned.

Also, as already mentioned, components consisting of the right side of Scenario Function such as L2(k, i), Y3(k, i), L3(k, i), Y4(k, i), and L4(k, i) are identifiers of function that induces Consciousness Unit-Link's semantic quality concerned with Equivalent Logical Atom of taking the word identifier as the Deuteronomy order.

A data field, which belongs either to media such as Screen and Printouts possessing an intermediary role of send and receive of information existing between a computer of information processing system, one kind of Natural meaning-space 701, and humans using it, or to medium of File existing in a computer and possessing a role memorizing information, can be specified by Definitive Identifier k and Word Identifier i.

In this instance, Homogeneity Vector L3(k, i) is a flowchart to determine logical structure which induces the univocal semantic quality slice assumed by Consciousness Unit-Link from W03 Pallet that shall Reduce and simulate Event meaning-space 703 into the computer space, by taking the Definitive Identifier k and Word Identifier i as independent variables. This L3(k, i) can expressed by a function, which means the codes of program can be determined with a singular meaning.

The Screen medium 4201 in Fig. 42 is a Definitive which is specified by taking independent variable k of L3 (k, i) as Definitive Identifier k1 (can be called 'Screen Identifier' herein), and the data field 4201 is a Word Identifier which is specified by taking independent variable i of L(k, i) as i1, i2, i3 belonging to the medium 4201.

Also, the flowchart 4202 indicates program's logical structure which induces the univocal semantic quality slice existing in Consciousness meaning-space 703 from W03 Pallet that has Reduced Event meaning-space 709 into the computer space, and it is the same logical structure as shown by the aforementioned Fig. 28. The codes part 4202a is a function to determine and create a series of codes that correspond to individual logic (4202c) of the logical structure, and herein it was expressed in programming language Visual Basic.

In the codes part, the k and i of '@k@_@i@', '@k@.@i@' are the same as independent variables k, i of L(k, i), and the '@k@' is a location for substituting a specific and particular Definitive Identifier, and the '@i@' is a location for substituting a specific and particular Word Identifier. For example, when Definitive Identifier is 'k1' and Word Identifier is 'i1', all logic of the flowchart part 4202 becomes as follows: The codes '@k@_@i@' become a code 'k1_i1', and the '@k@.@i@' becomes a code 'k1.i1'.

Although, the part '%46' is not clarified as an independent variable of L(k, i), it is one of those which inevitably become independent variables of L(k, i) by the providence of existence and it means to be an input/output attribute which indicates whether a data code to be set into the data field of the medium indicated by the Word Identifier is to be entered from outside of the system or output from inside of the system.

For example, in the '$IF %46 eq 1' (4203), if input/output attribute '%46' concerned with data field indicated by independent variables (k, i) is an input attribute ('eq 1'), that is, for example, if Word Identifier i1 is input attribute, then the next-line (4205a) of the '$IF %46 eq 1' (4203) shall be determined univocally as a code 'W3_k1_i1 = W02.k1.il'.

Also, in the '$IF %46 ne 1' (4207), if input/output attribute '%46' concerned with data field indicated by independent variables (k, i) is not an input attribute ('ne 1'), that is, for example, if Word Identifier i1 is output attribute, then the next-line (4205b) of the '$IF %46 ne 1' (4207) shall be determined univocally as a code 'W3_k1_i1 = W03.k1_f.il'.

That is, the parts of '$IF %46 eq 1' (4203), '$IF %46 ne 1' (4207), '@k@_@i@' and the '@k@.@i@' correspond to the independent variables which determine a series of codes of the process box 4205 of Self Creation in the flowchart.

Further to add, the 'W3_k1_i1' of the right side of the 'W3_k1_i1 = W03.k1_f.il' which is is the next-line column of the '$IF %46 ne 1' (4207) belongs to File identified by Definitive Identifier 'k1_f' that corresponds to Screen identified by Definitive Identifier k1 and it is data field W03 on the W03 Pallet concerned with words that are identified by Word Identifier 'i1'.

Although, in the codes' part, the 'If W3 @k@ @i@ = @c@ Then' (4209a) is not clarified as an independent variable of L(k, i), it is one of those which inevitably become independent variables of L(k, i) due to the logic of the Reduction of the providence of existence and it means it takes incorrect condition c of a data code value existing in the data field of the medium indicated by the Word Identifier.

For example, when the invalid condition of Word Identifier i1 is c=0, codes of the 'If W3_k1_i1 = 0 Then' shall be determined univocally.

As explained above, all of the step of Tense Control Vector uses Definitive Identifier k, Word Identifier i, input/output attribute '%46' and invalid condition c, as independent variables, and can functionally determine and create a series of codes and requirements of software simultaneously as a solution, thereby providing a state in which software can be specified univocally.

Next, explained herein is the point that independent variables of the function which is Tense Control Vector that is a means to univocally determine software are only words designated by users.

Fig. 43 is a conceptual diagram for explaining the state in which semantic quality is embodied as existence phenomenon in Natural meaning-space from the providence of existence and it is reduced into the computer space.

Inside traditional programs, besides user's designated words, there was a mixture of words prepared by development engineer's personal judgment. This is a fundamental cause that software became a black box.

On the other hand, in this invention, speaking conclusively, any users can univocally determine software requirement and programs merely by means of recognizable Media Identifier k, Word Identifier i and input or output attribute '%46'. The reason it is sufficient for any users merely by means of recognizable Media Identifier k, Word Identifier i and input/output attribute '%46' is that the background principle that has realized the present invention is a theory of the Providence of Existence.

According to a invention, as long as both concrete existence and non-concrete existence are existence phenomenon, there is an origin which has made the existence as an existence. In the origin, the quantum of semantic quality 501a is folded into a theoretical space called Consciousness meaning-space 703 and it shall be embodied into Natural meaning-space 701 through the action of the Providence of Existence and becomes existence phenomenon.

One existence phenomenon is a behavior 4301 of humans who use information processing system, and the behavior is to implement Cognition 4303 of an embodied semantic quality and proper speech and behavior 4301 based on Cognition 4303. That is, a clue of behavior 4301 is Cognition 4303 of an embodied semantic quality, and the cognition is to give a meaning for a word.

The word is a constituent consisting of a development requirement uttered by the development requiring party.

The process of the word embodiment is a software. The present invention is a method that supports human behavior 4301 by means of simulating the Providence of Existence which is Reduced into the computer space as a program that is an exact algorithm itself to embody semantic quality of such Consciousness meaning-space 703.

Therefore, the determination of software shall be done by specifying only units that identify semantic quality of existence phenomenon which influence human's behavior 4301. In case of an information processing system, units which identify semantic quality of existence phenomenon are nothing but words constituting the uttered development requirement which are pasted onto media such as Screen and Printouts, thereby representing data field to embody semantic quality of the words. Therefore, independent variables of the function of Tense Control Vector, which is a means to specify software as univocal, shall be only Definitive Identifier k and Word Identifier i, which are recognizable to any users.

Below are explanation made on that there are five kinds of a function in Tense Control Vector composed of Definitive Identifier k and Word Identifier i only that are recognizable to any users, the Tense Control Vector being a means to univocally determine a software.

The Scenario Function is expressed by the following formula, as aforementioned.

$$T0 = \Phi 0(+\{\Phi p\{\quad , L2(k, i), P2(j)\}\}k$$
$$+ \Phi p\{Y3(k, i), L3(k, i), P3(j), T1(f)\}$$
$$+ \{\Phi p\{Y4(k, i), L4(k, i), P4(j)\}\}k)$$

$$T1(f) = \Phi 1(\{\Phi p(rf, 2)\{\quad , L2(r, i), P2(r, j), P2(j)\}\}r$$
$$+ \Phi p(rf, 3)\{Y3(r, i), L3(r, i), L3(f, i), P3(j)\}$$
$$+ \{\Phi p(fr, 4)\{Y3(f, i), L4(f, j), P4(f, j), P4(j)\}\}f)$$

And, the components L2(k, i), Y3(k, i), L3(k, i), Y4(k, i), and L4(k, i) consisting of the right side of Scenario Function is a function to induce semantic quality of every Word Identifier existing in Consciousness meaning-space 703.

Fig. 44 and Fig. 45 are diagrams for explaining the logical structure of the five kinds of Tense Control Vector concerned with Definitive Identifier k and Word Identifier i that are recognizable to any users. Explained herein by using these diagrams is a theoretical premise, viewed from the Providence of Existence, of Screen which is existence phenomenon.

In existence phenomenon 4401 of Fig. 44, non existence of data code in data field 4401a, which belongs to Screen identified by Definitive Identifier k1 in existence phenomenon 4401 and is identified by Word Identifier i1, means that semantic quality 501a of Consciousness Unit-Link 1309 taking Logical Atom of Deuteronomy order i1 as Equivalent Logical Atom 1307 has not embodied yet and waiting for its embodiment.

On the other hand, existence of data code in data field 4401a, which belongs to Screen identified by Definitive Identifier K1 in existence phenomenon 4401 and is identified by Word Identifier i1, means that semantic quality 501a of Consciousness Unit-Link 1309 taking Logical Atom of Deuteronomy order i1 as Equivalent Logical Atom 1307 has already embodied and reached existence phenomenon via operator of this Screen and that the semantic quality has now been input as data code in order to return to the Reduction destination of information processing system. The input of data code is thought to be a synchronizing action to satisfy this Providence of Existence.

Also, the preparation of Screen identified by Definitive Identifier k1 and data field 4401a, which belongs to the Screen and is identified by Word Identifier i1, means that semantic quality 501a of Consciousness Unit-Link 1309 taking Logical Atom of Deuteronomy order i1 as Equivalent Logical Atom 1307 has been recognized via the consciousness of those who wanted to prepare such a data field. That is, it has a meaning that the factor (proposition) of the depths of consciousness of software requirement and the result (solution) of software originated in such a factor has been fixed as univocal (TRUE viewed from the proposition).

By the operation of Screen with such a theoretical background, W02 Pallet 4403 operates, which imitates Definite meaning-space 715 that has been Reduced into the computer space. That is, by the action of Idea Rule, Logical Atom is created as convergent structure, and, by the Convergence Rule established in the convergent structure, Convergent Dense Set 1401 and its complementary set, Secondary Convergent Dense Set 1405 are created, then Cognition Rule is created in the Convergent Dense Set 1401.

On the other hand, Contingent Rule is created in the Secondary Convergent Dense Set 1405, which tried to realize the creation of Definite Unit-Link 1413 by the Cognitive Rule. Hereupon, Idea Rule corresponds to Pallet Chain Function, and the following roles are assumed: Receiving of data from Screen to simulate the creation of divergent structure and convergent structure by Deuteronomy, activating W02 Pallet to simulate the creation of Definite meaning-space, activating W03 Pallet to simulate the creation of Event meaning-space as well as activating W04 Pallet to stimulate the creation of Equivalent meaning-space 707, and sending data to Screen to simulate Natural Unit-Link by the unitization by the Coupling of Equivalent Unit-Link. In this context, the Convergence Rule and the Contingent Rule correspond to Pallet Function, whereas the Convergence Rule takes the role of grouping Tense Control Vectors which imitate the establishment of Convergence Dense Set 1401.

When Convergent Dense Set 1401 is created, which is a set of Logical Atoms composed by the duplicate permutation, Unit-Link cannot be established in a set composed of duplicated Logical Atoms. Thereupon, the Convergence Rule, that is, W02 Pallet Function, autonomously examines on the feasibility of the creation of a Contingent Rule in Secondary Convergent Dense Set 1405, which is a complementary set of Convergent dense Set 1401 in which Cognitive Logical Atoms are arranged in the descending of its semantic space diameter, on the intention to realize the providence of existence by Unit-Link creation.

This is an examination on whether it is Convergent Dense Set 1401 or not, which has a possibility to create Definite Unit-Link to grasp Consciousness Unit-Link in which the 'Kuh' is established. If the examination got passed, Contingent Rule is established, then by the Contingent Rule the action of Cognitive Rule is implemented. The Pallet Function is what imitates logic of such Convergent Rule and Contingent Rule, and specifically, it does activation and re-activation of Tense Control Vector.

Explained next is a theoretical premise of the logical structure of Homogeneity Vector which mounts L2(k, i) onto W02 Pallet.

Cognitive Rule of Convergent Dense Set 1401 activated by Contingent Rule shall establish Definite Unit-Link. In accordance with the Providence of Existence, the activated Cognitive Rule can always establish Definite Unit-Link, but this invention deals with a concept of software which Reduces the Providence of Existence into the computer space, so a certain situation occurs that cannot occur with the Providence of Existence. That is, the Providence of Existence treats irreversibility as axiom, whereas the operation of data code input becomes a reversible action to attempt returning semantic quality that has already become existence phenomenon to its origin.

This reversible action is an action against the axiom of the Providence of Existence. Being the action against means that there is a possibility of being FALSE. Accordingly, in reality, it eventually means that the logical structure must not be the one in which Definite Unit-Link 1413 shall inevitably be established.

From such a background, in Homogeneity Vector L2(k1, i1) 4405 which is Secondary Convergent Dense Set 1405 that has Reduced the Providence of Existence into the computer space, it becomes necessary at first to examine whether it is either Convergent Dense Set 1401 with the possibility of establishing Definite Unit-Link 1413 to grasp Consciousness Unit-Link in which the 'Kuh' is established, or Convergent Dense Set 1401 to establish Definite Unit-Link 1413 that can inevitably grasp Consciousness Unit-Link in which the 'Kuh' is established. In the former case, if there is the possibility for Definite Unit-Link 1413, it becomes necessary to reconfirm whether or not Definite Unit-Link 1413 will materialize without fail.

The Convergent Dense Set 1401 to establish Definite Unit-Link 1413 that can inevitably grasp Consciousness Unit-Link in which the 'Kuh' is established synonymously means that data code is not existent in the data field 4409 on W02 Pallet that belongs to Screen 4401 identified by Definitive Identifier k1 and is identified by Word Identifier i1 and that it is waiting to be embodied as data code via Equivalent Unit-Link, thereby semantic quality is induced by Event Unit-Link 1417.

On the other hand, Convergent Dense Set 1401 with the possibility of establishing Definite Unit-Link 1413 to grasp Consciousness Unit-Link in which the 'Kuh' is established synonymously means that data code is existent in the data field 4409 on W02 Pallet that belongs to Screen 4401 identified by Definitive Identifier k1 and is identified by Word Identifier i1 and that it is attempting to synchronize as Consciousness Unit-Link in which the 'Kuh' is estblished.

The examination on whether it is either Convergent Dense Set 1401 with the possibility of establishing Definite Unit-Link 1413 to grasp Consciousness Unit-Link in which the 'Kuh' is established or Convergent Dense Set 1401 to establish Definite Unit-Link 1413 that can inevitably grasp Consciousness Unit-Link is handled by the forefront judgment box 'Empty' (step 4406), and if there is the possibility for Definite Unit-Link 1413, it becomes necessary to reconfirm whether or not Definite Unit-Link 1413 will materialize without fail. This reconfirmation is handled by the process second box 'Attribute Check' (step 4407).

To grasp Consciousness Unit-Link in which the 'Kuh' is established is meant by that data field 4409 is existent on W02 Pallet which is identified by the Deuteronomy order i1 of the Equivalent Logical Atom concerned with Consciousness Unit-Link.

Therefore, the examination implemented by the forefront judgment box 'Empty' (step 4406) of Homogeneity Vector L2(k1, i1) becomes a logic to examine whether or not data code is existent in the data field 4409 of W02.k1.i1 to copy the existent location of semantic quality of Consciousness Unit-Link in which the 'Kuh' is established, which is identified by the Deuteronomy order i1.

And, when data code is not existent in the data field 4409 of W02.k1.i1, the second process-box check 'Attribute Check' (4407) aimed to examine on the establishment of Consciousness Unit-Link is omitted, assuming that Consciousness Unit-Link can be grasped in which the 'Kuh' inevitably is established. On the other hand, when data code is existent in the data field 4409 of W02.k1.i1, the second process-box check 'Attribute Check' (4407) is implemented, which is aimed to examine on the possibility of the establishment of Consciousness Unit-Link in which the 'Kuh' is established.

The establishment of Consciousness Unit-Link is inevitably accepted if originally accorded in the Providence of Existence, but the check on the acceptance or refusal of Consciousness Unit-Link is implemented in order to enable to input data code as an action that might violate the axiom of the Providence of Existence. The check assumes to examine on one of axioms of the Providence of Existence which is 'Is semantic quality univocal?' That is, in the Providence of Existence, there can be no sets composed of plural elements with different nature. Based on such a background, in the examination on acceptance or refusal of Consciousness Unit-Link in which the 'Kuh' is established, it implements an examination on the nature of data code embodied in data field, that is, 'Attribute Check' 4407.

Now, upon completion of the second process-box 'Attribute Check' (step 4407), an examination on acceptance or refusal of Consciousness Unit-Link, if the check result is judged as not violating the axiom of the Providence of Existence, the move to the next action is enabled in order to satisfy the providence of existence of an existence phenomenon of the input data code. This check result judgment is implemented by the third judgment box 'Acceptance' (step 4411), and the move to the next action to satisfy the providence of existence corresponds to a case where the third judgment box 'Acceptance' (step 4411) is TRUE.

When the third judgment box 'Acceptance' (step 4411) is TRUE, the process box 'Reset of Refusal Flag' (step 4415) is implemented which does the transfer from the state of uncertainty (FALSE).

Explained next is a theoretical premise of the logical structure of Duplication Vector which mounts Y3(k, i) onto W03 Pallet.

When the movement of W02 Pallet 4403 ends which imitates Definite meaning-space 705, the Pallet Chain Function which simulates Idea Rule activates W03 Pallet 4423 which imitates Event meaning-space 707. The operation of W03 Pallet 4423 means the creation of Event Unit-Link 1417 is implemented, and the implementation of creation of Event Unit-Link 1417 means that the Revelation 1415 of the Providence of Existence and the Association 1416 have been implemented.

To imitate this Revelation 1415 and Association 1416 is done by Duplication Vector Y3(k, i) (4425). That is, the completion of the movement of Homogeneity Vector L2(k1, i1) (4405) which was mounted on W02 Pallet 4403 means that Definite Unit-Link 1413 has been accepted and the Equivalent Logical Atom of the Definite Unit-Link 1413 is a unique Logical Atom called Boundary Logical Atom.

The reason such a Unit-Link is established is attributable to 'the stabilization as a system.' However, a stabilized state has not yet been reached, therefore, the 'stabilization as a system' must be reached by all means, which is the instinct of Logical Atom. Thereupon, Contingent Rule of the Secondary Convergent Dense Set 1405, which is a complementary set of the Second Convergent Dense Set 1401, starts to operate. By the Contingent Rule, the Cognitive Rule of the Second Convergent Dense Set 1401 is activated and undertakes the construction of the Unit-Link.

However, the Cognitive Rule of this Second Convergent Dense Set 1401 cannot specify Logical Atom equivalent to its own Convergent Dense Set 1401. This is because the Equivalent Logical Atom's applicant is a Boundary Logical Atom which is also a unique Logical Atom. However, so as to construct the Unit-Link by all means for the 'stabilization as a system', it prompts revelation of conditions for materialization of the Second Cognitive Unit-Link against Consciousness Unit-Link via the first Equivalent Logical Atom possessing the equivalent semantic space diameter. This is called 'Revelation'.

The Consciousness Unit-Link attempts to establish the Unit-Link with Consciousness Logical Atom with the smaller semantic space diameter, which is situated at the nearest of the total sum of semantic space diameters of odd-number positions of Logical Atoms, arranged in the ascending order of the vital forces of Logical Atoms of the divergent dense set, including the Boundary Logical Atom. In this instance, if Consciousness Logical Atom with the nearest and smaller semantic space diameter has already been used as Equivalent Logical Atom of the other Divergent Dense Set 1301, it cannot be chosen as its Equivalent Logical Atom, so it proceeds to the next-best Logical Atom. By choosing this the next-best Logical Atom, at last the Unit-Link is established by taking Boundary Logical Atom as Equivalent Logical Atom. This is Consciousness Unit-Link in which the 'Kuh' is established.

When this Consciousness Unit-Link is established, a new rule is established in the Consciousness Unit-Link's secondary structure so as to respond to the Revelation against this Consciousness Unit-Link. The new rule shall appoint Convergent Dense Set 1401 of the Cognitive Logical Atom composed of the semantic space diameter which is equivalent to individual semantic space diameters of the Divergent Dense Set 1301 of the Consciousness Unit-Link as an answer to the Revelation (1415) of conditions for materializing Cognitive Unit-Link. An action of this appointment is an action called 'Association'. By the movement of the Contingent Rule of the Divergent Dense Set 1401 and the activation of the Cognitive Rule accompanying the movement, Event Unit-Link 1417 is established. Upon the establishment of this Event Unit-Link 1417, Convergent Rule and Contingent Rule also intervene, and the action for the grouping and activating Tense Control Vectors by Pallet Function which simulates these rules is implemented in the same manner as in the case of W02 Pallet (4403).

As explained above, in the Providence of Existence, the Duplication Vector Y3(k, i) (4425), so as to realize actions from Revelation (1415) to Association (1416), implements the examination in the judgment box 'Empty' (step 4427) concerning the presence of data code in the data field 4409 of W02.k1.i1 which imitates the existent location of semantic quality of Definite Unit-Link 1413 that has grasped Consciousness Unit-Link in which the 'Kuh' is established.

When data code exists in the data field 4409 of W02.k1.i1, the input data code is treated as semantic quality, thereby attempting to satisfy the Providence of Existence that stands on irreversibility as axiom. For this reason, in order to fulfill a reversible action of returning the data code as before that became existence phenomenon via humans, the data code is duplicated, in the 'Duplication' process box (step 4429), to the data field 4431 of W03.k1.i1 from the data field 4409 of W02.k1.i1.

On the other hand, when data code does not exist in the data field 4409 of W02.k1.i1, it is necessary to induce semantic quality in Event Unit-Link 1417 for the first time. So, the state of the data field 4409 of W02.k1.i1 is maintained as it is without being duplicated.

Explained next is a theoretical premise of the logical structure of Homogeneity Vector which mounts L3(k, i) onto W03 Pallet.

Upon receiving the Providence of Existence's actions of Revelation 1415 and Association 1416, the Cognitive Rule created in the third Convergent Dense Set 1401 undertakes the construction of the Unit-Link. Hereupon, if existence phenomenon already exists, that is, when data code exists in the data field 4431 of W03.k1.i1, to establish an Event Unit-Link 1417 means the duplication of the embodiment of existence phenomenon, which leads to the violation of the axiom that semantic quality shall be univocal. The logic to prevent this violation of the axiom corresponds to the forefront judgment box 'Empty' (step 4435) of the Homogeneity Vector L3(k, i) 4433.

Now, the Contingent Rule of the Secondary Convergent Dense Set 1405, which places the Convergent Dense Set 1401 chosen by the Association at the third position by activating the self Cognitive Rule, tries to establish Event Unit-Link 1417. In the establishment of this Event Unit-Link 1417, the Equivalent Logical Atom is tried to become the same Logical Atom as the Equivalent Logical Atom of Definite Unit-Link 1413, that is, the Equivalent Logical Atom of the Consciousness Unit-Link in which the 'Kuh' is established. The part which simulates the action of this Event Unit-Link 1417 is the second process box 'Self Creation' (step 4437) of L3(k, i). The reason it is called 'Self Creation' herein means that the semantic space diameter of Convergent Dense Set 1401 and the semantic space diameter of its Equivalent Logical Atom are equivalent to each other, that is, of the same contents, that is, a Logical Atom possessing the same semantic space diameter as that of the self is identified (created) as self.

Next, only in the case (YES) (4435) where Event Enit-Link could be established from the Association form the 'Consciousness Unit-Link in which the Kuh is established,' the semantic quality is treated as a data code as semantic quality of the self's word (4437). Even if the creation of semantic quality has been established (4439), there happens that the semantic space diameter of the Equivalent Logical Atom of Event Unit-Link can become, in error, smaller than that of its dense structure. In such an instance, the Event Unit-Link must not be established.

The Equivalent Logical Atom makes 'Recurrence' autonomously as Consciousness Logical Atom. A check of such an error must also be implemented in L3(k, i). In L3(k, i), semantic quality of self's word is created on the work area 4440 (4437), and if semantic quality has been induced to the area (4439) the validity of the data code is examined (4443).

If the examination gets passed through at the same time if it is not recurrence, logic needed will be to set the data code (4441) created on the work area 4440 to the data field 4431 of the word as original word's, and to indicate that this word's logic itself has moved from refusal to acceptance (Reset 4447 of Refusal Flag 4446 and Set 4445 of Restart Flag 4444).

Explained next is a theoretical premise of the logical structure of Duplication Vector which mounts Y4(k, i) onto W04 Pallet.

Upon the completion of the movement of W03 Pallet 4423 to imitate Event meaning-space 707 in Fig. 45, the Pallet Function to simulate Idea Rule activates W04 Pallet 4501 which simulates Equivalent meaning-space 709. The operation of W04 Pallet 4501 means that the creation of Equivalent Unit-Link 1419 is implemented, and the implementation of creation of Equivalent Unit-Link 1419 means that the Regulation of Providence of Existence have been implemented.

The embodiment of the pre-condition for the materialization of this Regulation is handled by Duplication Vector Y4(k, i) (4503).

As already explained in the section related to 'the inducement of Scenario Function from Associative Equation', the Duplication Vector is a product based on the spatial simulation which was prepared artificially. That is, Equivalent meaning-space 709 in the Providence of Existence is directly created by Regulation from Event meaning-space 707, and it never intervenes Consciousness meaning-space 703. However, as already explained so as to satisfy the Providence of Existence in the spatial simulation as a sufficient necessary condition, the Duplication Vector Y4(k, i) was produced as a necessity. Now, the establishment of Event Unit-Link 1417 means that the Unit-Link has been established in Convergent Dense Set 1401 equivalent to the semantic space diameter of Divergent Dense Set 1301 concerned with Consciousness Unit-Link in which the 'Kuh' is established.

However, even with creation of this Unit-Link, the 'Stabilization as a system' has not yet been reached, therefore, a rule oriented towards further 'stabilization as a system' is created in Event Unit-Link 1417. The rule attempts to reconstruct Logical Atoms of the Convergent Dense Set 1401 comprising of the Event Unit-Link 1417 further into the duplicate permutation and to perform the 'stabilization as a system' by converting all the reconstructed Logical Atoms into Unit-Link, thereby the Logical Atoms behaving as if having proliferated. The reconstruction of this duplicate permutation and the action towards the creation of Equivalent Unit-Link 1419 are called 'Regulation', and the dense set of the duplicate permutation is called 'Convergent Dense Duplicate Set'.

The Equivalent Unit-Link 1419 created in this manner is based on the proliferation, it inevitably inherits Equivalent Logical Atoms of Event Unit-Link 1417. Further to add, upon the creation of this Event Unit-Link 1417, Convergent Rule and Contingent Rule intervene, and the action for the grouping, activation and reactivation of Tense Control Vector by Pallet Function which simulates these rules is implemented in the same manner as in the case of W02 Pallet.

As explained above, the Duplication Vector Y4(k, i) (4503) is a logic to assume the action succeeding Equivalent Logical Atom of Event Unit-Link 1417 as Equivalent Logical Atom of Equivalent Unit-Link 1419 so as to satisfy actions of the Providence of Existence leading to Regulation. In order to find if the Equivalent Logical Atom of Consciousness Unit Link in which the 'Kuh' is established is existent in the 'Empty' judgment box (step 4505), it examines on the presence of data code in the data field 4409 of W02.k1.i1 which imitates the existent location of semantic quality of Definite Unit-Link 1413.

When data code exists in the data field 4409 of W02.k1.i1, it duplicates the data code into the data field 4509 of W04.k1,i1 from the data field 4409 of W02.k1.i1 in the 'Duplication' process box (step 4507) so as to succeed the Equivalent Logical Atom of Definite Unit-Link 1413 which has created the semantic quality as the Equivalent Logical Atom of Equivalent Unit-Link 1419.

On the other hand, when data code does not exist in the data field 4409 of W02.k1.i1 (4511), it examines on the presence of data code of the data field 4431 of W03.k1.i1 which simulates the inducement of semantic quality of Event Unit-Link 1417 (step b4513). When data code exists in the data field 4431 of W03.k1.i1, it duplicates the data code into the data field 4509 of W04.k1,i1 from the data field 4431of W03.k1.i1 in the 'Duplication' process box (step 4515) so as to succeed the Equivalent Logical Atom which has created the semantic quality as the Equivalent Logical Atom of Equivalent Unit-Link 1419.

Explained next is a theoretical premise of the logical structure of Homogeneity Vector which mounts L4(k, i) onto W04 Pallet.

Upon receiving the Providence of Existence's action of Regulation, the Cognitive Rule of the Convergent Dense Duplicate Set undertakes the construction of the Unit-Link. Hereupon, that the Equivalent Logical Atom of Event Unit-Link 1417 is succeeded is the mandatory condition to materialize Equivalent Logical Atom, in the first judgment box 'Empty' (step 4519) of L4(k, i) (4517) a check is implemented on the presence of data code in the data field 4509 of W04.k1.i1. What is intended by Equivalent Unit-Link 1419 is to embody semantic quality of Consciousness Unit-Link in which the 'Kuh' is established as existence phenomenon.

The part to simulate this Equivalent Unit-Link 1419 is the second process box 'Embodiment Edit' (step 4521) and the 'Property Code Set' process box (step 4523) of the L4(k, i) (4519), and the 'Refusal Code Setting' (step 4527) and the judgment box which leads up to it 'W02/W03 Refusal?' (step 4525). The 'W02/W03 Refusal?' (step 4525) has a role to embody the refusal detected in Definite meaning-space 705 and Event meaning-space 707, the 'Property Code Set' process box (step 4523) is the part to assume roles such as the setting of a cursor into the related data field and the adjustment of display brightness.

As explained above, the kinds of the function of Tense Control Vector which is a means to univocally determine software are five kinds of Unit-Links themselves which intervene up to the point of the embodiment of user-designated words as existence phenomenon. So, the function of the Tense Control Vector is featured by the five kinds.

Explained next is that the sufficient constituent elements needed to materialize the concept of program composed of a series of codes are three components, that is, data filed, process logic and data code.

Fig. 46 is a diagram for explaining the sufficient constituent elements needed to materialize the concept of program composed of a series of codes.

In this invention, the concept of program composed of a series of codes is regarded as existence phenomenon. The existence phenomenon is regarded as what semantic quality created in Consciousness Unit-Link is inevitably embodied into in Natural meaning-space 701 by the action of the Providence of Existence and has become existence phenomenon through human cognition. Then, the elements which has realized semantic quality and Consciousness Unit-Link that creates the semantic quality must be sufficient constituent elements needed to materialize the concept of program composed of a series of codes.

The Consciousness Unit-Link is a relation between the semantic space diameter possessed by Divergent Dense Set 1301 and Equivalent Logical Atom possessing equivalent semantic space diameter, and what is created in the relation is semantic quality 501a which corresponds to the elementary particle of existence phenomenon. The semantic quality 501a can be identified as univocal by the Deuteronomy order of the Equivalent Logical Atom concerned with Consciousness Unit-Link.

The program composed of a series of codes that shall Reduce and realize such Consciousness Unit-Link into the computer space is:

- what has Reduced semantic quality 501a induced by Consciousness Unit-Link 1309 as data address 4601 of the main memory which is identified by Definitive Identifier and Word Identifier,
- what has Reduced Consciousness Unit-Link 1309 which assumes the inducement of the semantic quality 501a as process logic 4603 composed of a series of codes,
- what has Reduced semantic quality 501a induced by Consciousness Unit-Link 1309 as data code 4605 to be created in the data address of the main memory.

These elements can be regarded as the sufficient constituent elements needed to materialize the concept of program composed of a series of codes.

Next, kinds of data address which is a sufficient constituent element needed to materialize the concept of program composed of a series of codes are data field, restart flag, refusal flag, and property code of data field, that is, the parts indicated by an arrow in Fig. 45, which are sufficient.

That is, the Self Creation means to substitute semantic space diameter with the same value as the self's semantic space diameter ri.

In other words, it is synonymous with the awareness of the self (to wake up or to recollect a memory which the self memorized) from the state of 'Kuh' (the state of not being aware of the self = a state of sleep).

Next, kinds of process logic (Self Creation) of the data address which is a sufficient constituent element needed to materialize the concept of program composed of a series of codes are three kinds, that is, α-type (existence), β-type (reference) and γ-type (modification), which are explained herein.

Fig. 19 is a conceptual diagram for explaining that process logic are of three kinds, that is, α-type (existence), β-type (reference) and γ-type (modification).

In this invention, the concept of program composed of a series of codes is also regarded as existence phenomenon. The existence phenomenon is regarded as what semantic quality created in Consciousness Unit-Link is inevitably embodied into in Natural meaning-space 701 by the action of the Providence of Existence and has become existence phenomenon through human cognition. Then, semantic quality induced by Consciousness Unit-Link is what is induced to the relation of taking Consciousness Logical Atom that possesses semantic space diameter equivalent to the significance space diameter of Divergent Dense Set 1301 of the Consciousness Unit-Link as Equivalent Logical Atom.

The Reduction of the providence of existence of such Consciousness Unit-Link into the computer space is synonymous with that semantic quality 501a induced by Consciousness Unit-Link is grasped by the Event Unit-Link 1905 with Association 1903 and created in the data address of the main memory which is identified by the Word Identifier. It shall be embodied as data code to the data address on Definitive Identifiers such as Screen that possesses the same Word Identifier as the identifier. This action can be regarded as 'Reference type' (β-type) 3607.

Also, those which were embodied in such a manner are also words uttered as development requirement, and the Reduction by pasting the words onto Screen means that semantic quality 501a induced by the Consciousness Unit-Link must be present also in the world of Reduction. In order to realize an action of making semantic quality 501a of Consciousness Unit-Link present in the Reduction world (that is, synchronous action), Revelation 1911 from Definite Unit-Link 1903 is mandatory from the point of the Providence of Existence. And, this action can be regarded as 'Registration type' (α-type) 1913.

In reality of the Reduction into the computer space, however, the attempt of canceling the restriction of the main memory capacity is tried by 'Modification' almost daily, and the 'Existence type' is additionally classified to the presence or non-presence of the action of 'Modification'. The three kinds of action including this 'Modification' can be regarded as sufficient kinds of process logic required for the Self Creation into data address. In this invention, types of this action are called 'α-type (existence)', 'β-type (reference)' and 'γ-type (modification)'.

Explained next are not only a logical structure only composed of autonomous but also independent action and its theoretical premise.

Fig. 47 is a conceptual diagram for explaining the scheme of the autonomous movements.

In the Providence of Existence having background principle enabling the establishment of the present invention, the Primitive Logical Atom 801 existing latently in the Incomprehensible meaning-space 713 as a primitive state takes a premise of fundamental hypothesis that it is composed of the Deuteronomy order 801a necessary to establish existence, the attributes called the vital force 801c and the Semantic Rule 801b which is a rule to vitalize these attributes. And, it also stands on the axiom that these attributes behave autonomously as instinct or genes towards establishing existence.

For example, semantic quality 801b of the Primitive Logical Atom 801 activated by the Incomprehensible Rule 4701 makes semantic quality of the self's Deuteronomy order 801a and the force 801c. Then, the Primitive Logical Atom 801 autonomously makes projection (4703) from the Incomprehensible meaning-space 713 towards the establishment of existence. The Logical Atom projected from the Incomprehensible meaning-space 713 autonomously constructs a dense structure and a secondary dense set in accordance with its own attribute and the axiom established based on the attribute so as to establish existence.

In the both sets, a rule is autonomously created, and, by the activation from the rule, semantic quality is autonomously induced through the materialization of the Unit-Link and its result. Then, a secondary structure is autonomously built by the unit-link. In the secondary structure, a secondary rule is autonomously created, and by the secondary rule, a new Coupling is autonomously created. It is thought that the autonomy shall be able to be identified by the Deuteronomy order of the Equivalent Logical Atom only.

The logical structure of the program composed of a series of codes that has Reduced the Scenario Function to induce such Consciousness Unit-Link into the computer space is theorized without inconsistency so as to satisfy such Providence of Existence. Therefore, the Tense Control Vector of the present invention has a logical structure which performs the purpose with thoroughly autonomous action.

Explained next is that a theoretical base of the logical structure to guarantee autonomous and independent actions are 'Empty', 'Acceptance' and 'Restart'.

An autonomous concept is thought to mean 'To rule self's behavior by the self.' or 'The self's behavior is affected by nothing but the self.' This state is thought to be synonymous with a concept of 'independence'. In this invention, this 'self' is an object which is identified by the identifier called the Deuteronomy order 801a that is assumed by the Logical Atom, and, in a software, it is an object which can be identified by the Definitive Identifier and Word Identifier as univocal.

Fig. 48 is a diagram to show parameters that determine elements of the Tense Control Vector and explain a theoretical base of the autonomy.

Now, as explained in Fig. 42, Fig. 43, Fig. 44 and Fig. 45, the Tense Control Vector of this invention is a program composed of a series of codes, and it is a program that can be univocally specified because all of its constituent elements such as program identifier 4801, data address 4803, process logic 4805 and data code 4807 can be determined in the linear format by using identifiers composed of the combination of Definitive Identifier 4809 and Word Identifier 4811 as independent variables. If the identifier is rephrased by the 'oneself,' it may as well be said that the establishment of the logical structure is autonomous and independent, as shown by this Fig.

Fig. 49 is a diagram for explaining a theoretical base of the autonomous movement possessed by the Tense Control Vector, which uses a sample Homogeneity Vector that is mounted on W03 Pallet' by means of the flowchart of Tense Control Vector and the a series of codes corresponding to the flowchart. Further to add, the codes are a program of Homogeneity Vector mounted on W03 Pallet by designating Definitive Identifier as k and k_f and Word Identifier as i, which is described in programming language Visual Basic and a program of Pallet Function which activates the program of Homogeneity Vector.

That is, the program 4901 of Pallet Function resets Restart Flag at first (4903), and activates programs 4911a and 4911b of Homogeneity Vector belonging to the self Pallet with no argument and irrespective of the activating order (4905, 4907). Thereafter, until the Restart Flag is reset, steps from the Restart Flag reset (4903) to the activation (4905, 4907) of the self Pallet's Homogeneity Vector programs 4911a and 4911b are repeated (4909).

The Homogeneity Vector programs 4911a and 4911b have all the same logical structure 4911 no matter what words are involved. The Pallet Function program 4901 activates Homogeneity Vector programs 4911a and 4911b (4905, 4907). It is explained therein that the activation is caused by Call command. Instead of this Call command, however, programs 4911a and 4911b may as well be placed directly into the Call command part, which is identified by the identifier 'L3_k_i' and 'L3_k_f_i'. That is because the part will autonomously start to operate due to the principle of computer, if the memory indicated by the computer's program counter corresponds to the part of programs 4911a and 4911b identified by identifiers 'L3_k_i' and 'L3_k_f_i'.

Now, Homogeneity Vector programs 4911a and 4911b which started to operate in this manner do not succeed any arguments. This means that they are not affected at all by the Pallet Function program and the other Homogeneity Vector programs. That is, the program started to operate autonomously only because of the condition encountering the location given with a clue to move by the computer's program counter.

Next, conditions of branching 4913, 4917, 4919 upon proceeding process of Homogeneity Vector programs 4911a and 4911b which started to operate autonomously are all with regard to addresses 4913a, 4917a, 4919a, which are indexed by the self's Word Identifier, from the beginning to the end. This, too, means the autonomy.

Further, the setting destinations of data code 4915, 4921, 4923, 4925 are all with regard to addresses 4915a, 4921a, 4923a, 4925a, which are indexed by the self's Word Identifier, from the beginning to the end. This, too, means the autonomy. Further to add, when data code cannot be set to the address 4915a which is indexed by the self's Word Identifier, it has a mission to set data code desperately to the address 4915 which is indexed by the self's Word Identifier by the repeated operation 4909. This, too, means the autonomy.

The stop condition of this repeated operation 4909 is only that the data code is set to the address which is indexed by the self's Word Identifier (4915). This, too, means the autonomy. In autonomy, it is independent, and in independence, it is featured by not being dependent on any other programs.

Explained next is a point that a theoretical base of the materialization of the logical structure being a primary and singular entity is the Providence of Existence of 'Does it exist?'.

Fig. 50 is a conceptual diagram for explaining the theoretical base citing that the materialization logic is 'Does it exist?'.

The meaning the uncertainty has been cancelled from the requirement definition document and a series of codes, which are existence phenomena is that it is based on the principle or the providence, as aforementioned. For example, for a logical structure to realize judgment of 'Acceptance', the following two methods are assumed: One is a method of making judgment of acceptance based on the data code's contents of the Self Creation result and the other is a method based on whether data code of the Self Creation result exists or not. This invention adopts judgment on whether data code of the Self Creation result exists or not. The theoretical base is, as already mentioned often, that the background principle of the present invention is the Providence of Existence, and, in the Providence of Existence, the issue is whether the creation of Event Unit-Link 1417 was either established or not (4918). A concept of what becomes of semantic quality by the creation of Event Unit-Link can be nothing but 'Recurrence' 4919.

Explained next is the introduction of a concept of 'Equivalent Word' which is a means making the logical structure to satisfy 'univocal' meaning unique.

Semantic quality of Consciousness Unit-Link is always univocal as its axiom, so when Equivalent Logical Atoms of the Consciousness Unit-Link are fulfilled by words on the media such a Screen, Printouts, the Self Creation to embody semantic quality of data code into the data field identified by the Word Identifier also must be a primary and only logic. At the stage of determining the word, however, polysemous Self Creation can constantly occur as a result of the uncertainty of thinking of humans who determine it. In order to cope with such an instance, in this invention, the Self Creation logic can be made to become univocal by introducing the concept of 'Equivalent Word'.

That is, the data field on the Pallet which corresponds to the Word Identifier prepared on the media such as Screen, Printouts are Reduced to the main memory as data field identified by the Word Identifier. Homogeneity Vector to appear in the field shall be made univocal concerning the Self Creation logic. Thereupon, Homogeneity Vector is prepared for every identifier , and a check on executing each Self Creation is added to the check of 5103a, 5103b and 'Empty'. As a result, the Self Creation to act upon the data field 5101 become only either one of them, and it shall be able to identify as the inducement of the univocal semantic quality by the Homogeneity Vector's identification.

Fig. 51 is a conceptual diagram for explaining the appearance of plural Homogeneity Vectors corresponding to one data field.

As shown by the same diagram, against one data field 5101, plural Homogeneity Vectors 5103a, 5103b materialize Self Creation. However, it never happens that plural Homogeneity Vector materialize Self Creation at the same time.

XXVII. Pallet Chain Function

<Points of Pallet Chain Function in the present invention>

So as to realize the univocal relation between a requirement definition document of all software composed of natural language and a program composed of a series of codes, the Pallet Chain Function was invented as a logical structure to satisfy environments that enable the materialization of the Homogeneity Map and Tense Control Vector, which are means of inevitably eliminating uncertainty latent in existence phenomenon involved.

<The meaning of 'The Pallet Chain Function is a logical structure to build environments for the existence of Homogeneity Map and Tense Control Vector>

Fig. 52 is a conceptual diagram for explaining the principle of software determination based on the present invention.

The principle of software determination based on the present invention goes back, as shown by the diagram, to the scheme of recognizing each of individual existence phenomenon 5201 individually as itself, that is, to the domain generally called the depths of consciousness.

If a basic element to identify an object for giving a meaning is regarded as word 5203, an original element of what becomes a meaning 5205 that is attached to the word 5203, that is, semantic quality 501a, 5207, already exists in Consciousness meaning-space 703, and, by originating in semantic quality 501a, 5207, the semantic quality 501a, 5207 embodies irreversibly into space called Natural meaning-space 701, then it is given a meaning (that is, is recognized), thereby reaching to Existence phenomenon 5201. The process (which is the algorithm called the Providence of Existence 5209 in the theory of the 'Internal Structure of Existence' which was established as a principle providing the background of this invention) is exactly the software determination principle itself.

Further to add, if the software determination scheme 5211 based on the other traditional methods than the present invention is viewed from the standpoint of the Providence of Existence 5209 based on the present invention, it is attempted to grasp software by means of personal cognition of the already embodied existence phenomenon, and it is a conception fundamentally different from the present invention that attempts to grasp software by the process lading to existence phenomenon.

This process led to the present existence phenomenon was made into algorithm and it is called 'Association Equation' that forms a theoretical expression of the present invention as aforementioned. In the Association Equation

$$rj = Tij(ri)$$

the independent variables of the space duplication function Tij take Deuteronomy Order i that is assumed by the Equivalent Logical Atom concerned with Consciousness Unit-Link in Consciousness meaning-space 703 which is a theoretical space and semantic space diameter ri that is induced by the Consciousness Unit-Link, as their variables, so it is the existence not visible to humans belonging to Natural meaning-space 701 and it is impossible to specify it.

Thereupon, it is devised so as to realize the materialization of the Association Equation that determines a corresponding relation between Consciousness meaning-space 703 and Natural meaning-space 701 in light of the relation among Definite meaning-space 705, Event meaning-space 707 and Equivalent meaning-space 709, which are components constituting the Providence of Existence based on the present invention.

Fig. 53 is a diagram for explaining the concept of the Providence of Existence. This diagram uses a base of Fig. 19.

That is, the Providence of Existence 5209 has it that, in Definite meaning-space 705 the Definite Unit-Link 1413, at first, makes Revelation 1415 to Consciousness Unit-Link in which 'the Kuh' is established, then semantic quality induced to Consciousness Unit-Link is Associated 1416 to Event meaning-space 707 and grasped by Event Unit-Link 1417 thereafter. Then, the semantic quality of Consciousness Unit-Link grasped by the Event Unit-Link 1417 is succeeded to Equivalent meaning-space 709 by Regulation. The one which Equivalent Unit-Link 1419 in Equivalent meaning-space 709 Coupled and Unitized the semantic quality is Natural Unit-Link ri1421, and the semantic quality rj which went through the same process becomes existence phenomenon through human cognition. This is the theory of the Providence of Existence.

Next, the Providence of Existence 5209 shown by Fig. 53 can be corresponded to a solid-surface diagram as shown by Fig. 20, as aforementioned.

That is, Definite meaning-space 705, Event meaning-space 707 and Equivalent meaning-space 709 are simulated by the two-dimensional surface and corresponded as a closed Space, respectively. Also, the Consciousness Unit-Link in Consciousness meaning-space 703 is corresponded as being positioned in the space enclosed by the closed space. In such a solid-surface diagram, Definite Unit-Link 1413 firstly makes Revelation (1415) in Definite Space 705 to Consciousness Unit-Link in which 'the Kuh' is established.

Next, semantic quality 5207 induced to Consciousness Unit-Link is Associated 1416 to Event meaning-space 707 and grasped by Event Unit-Link 1417. Semantic quality 5207 of the Consciousness Unit-Link grasped by the Event Unit-Link 1417 is succeeded to Equivalent meaning-space 709 by Regulation , and Equivalent Unit-Link 1419 in Equivalent meaning-space 709 Couples and Unitized the semantic quality 5207, which can be corresponded as Natural Unit-Link 1421, that is, existence phenomenon.

Hereupon, the Fig. 20 which corresponded the Providence of Existence with the solid-surface diagram means that semantic quality ri of Consciousness Unit-Link in Consciousness meaning-space 703 can be grasped through the reverse process from the Coupling to the Association of semantic quality rj of the word which identifies phenomenal existence that can be specified in the Natural meaning-space 701. In the Providence of Existence, Definite Unit-Link 1413 and Revelation 1415 are additionally required as indispensable, and the Definite Unit-Link 1413 assumes a role of the determination of Consciousness Unit-Link, but not of the inducement from Consciousness Unit-Link. Therefore, if it is left as it is, it is theoretically unable to grasp semantic quality of Consciousness Unit-Link in Consciousness meaning-space 703 from the word identifying existence phenomenon that can be specified in Natural meaning-space 701.

The following explains the above more comprehensibly.

Definite Unit-Link → Revelation to Consciousness Unit-Link → Association from Consciousness Unit-Link → Event Unit-Link → Regulation of Event Unit-Link→Equivalent Unit-Link→Coupling of Equivalent Unit-Link → Natural Unit-Link (to realize Existence Phenomenon)

The grasping of Consciousness Unit-Link by the reverse process of the Providence of Existence is sufficiently covered by the part up to the gothic part.

But, the full specifications of the Providence of Existence is not satisfied with it (i.e., Definite Unit-Link and Revelation are not covered). Therefore, such reverse process has not been theoretically established.

For this reason, when corresponding the Providence of Existence with the solid -surface diagram so as to grasp semantic quality of Consciousness Unit-Link in Consciousness meaning-space 703 from the word identifying existence phenomenon that can be specified in Natural meaning-space 701 (In the Providence of Existence, Definite Unit-Link 1413 is the starting point), the following scheme is devised so as to satisfy the Providence of Existence, thereby treating Consciousness Unit-Link as the starting point.

That is, in the Providence of Existence, the Idea Rule establishes both divergent structure and convergent structure at the same time. Next, in the divergent structure, a Divergent Rule is autonomously created.

On the other hand, in the convergent structure, a Divergent Rule is autonomously created. Then, the Divergent Rule establishes a divergent structure by taking a divergent dense structure and a secondary divergent dense set as a relation of complementary sets.

On the other hand, the Convergent Rule establishes a convergent structure by taking a convergent dense set and a secondary convergent dense set as a relation of complementary sets.

Next, in each of the divergent dense sets, Consciousness Rule is autonomously created, and in each of the secondary divergent dense sets, Volition Rule is autonomously created. Then, respective Volition Rules immediately operate upon their creation and activate their own Consciousness Rule. The activated individual Consciousness Rules establish Consciousness Unit-Link which takes, as Equivalent Logical Atom, Consciousness Logical Atom with possession of the semantic space diameter equivalent to the semantic space diameter of the self divergent dense set. That is, individual divergent dense sets establish Consciousness Unit-Link all at once simultaneously.

On the other hand, in each of the convergent dense sets, Cognitive Rule is autonomously created, and in each of the secondary convergent dense sets as well, a rule is tried to create autonomously. But, both convergent dense set and secondary convergent dense set are based on root sets that are convergent structures, so Logical Atoms exist in duplication in either of the sets. In the state of such a duplication, the univocal rule cannot be created in principle, therefore so as to distinguish a set composed of Logical Atoms with no duplication, each of the sets are re-arranged in the descending order in terms of their semantic space diameters. In this manner, the first-positioned set composed of Logical Atoms with no duplication is identified casually and, in the set, Contingent Rule is created autonomously.

As soon as the first Contingent Rule is created, it operates immediately and activates its own Cognitive Rule. The activated Cognitive Rule establishes Cognitive Unit-Link which takes, as Equivalent Logical Atom, Cognitive Logical Atom with possession of the semantic space diameter equivalent to the semantic space diameter of the self convergent dense set. The first Cognitive Rule established in this manner is Definite Unit-Link, and the second Cognitive Unit-Link rules Revelation and Association, and the third Cognitive Unit-Link is Event Unit-Link.

As above, in view of a clue to the process embodying existence phenomenon, the starting point is Definite Unit-Link, but the Consciousness Unit-Link which accepts the Definite Unit-Link's Revelation has already been established. Therefore, viewed from the standpoint of the inducement of the contents (that is, semantic quality) possessed by the origin of existence phenomenon, it can be regarded as a scalar volume which takes the semantic quality of Consciousness Unit-Link can be regarded as a starting point. If Natural Unit-Link (existence phenomenon) equivalent to the scalar volume is realized by the vector disintegration and synthesis, it shall satisfy the Providence of Existence.

That is, as shown by Fig. 21, Definite Unit-Link 1413 induces a slice (vector disintegration 1) of the semantic quality concerned with Consciousness Unit-Link viewed from the direction of Definite meaning-space.

Event Unit-Link 1417 induces a slice (vector disintegration 2) of the meaning-space concerned with Consciousness Unit-Link viewed from the direction of Event meaning-space.

Equivalent Unit-Link 1419 delivers a slice (vector disintegration 3) of the significance concerned with Consciousness Unit-Link viewed from the direction of Equivalent Space.

Then, Revelation 1415 and Association 1416 synthesize the dissolved vector 1 and 2, and Regulation (1418) synthesizes the synthesized vector and vector 3.

That is, in the Providence of Existence, both convergent structure and divergent structure are created at the same time by Idea Rule, and both Divergent Rule and Convergent Rule are created at the same time, thereby creating divergent dense set 1301 and secondary divergent dense set 1302 and also convergent dense set 1401 and secondary convergent dense set 1405 are created respectively at the same time.

Next, the Volition Rule established in the secondary divergent dense set 1302 activates the Volition Rule established in the divergent dense set 1301, then all Consciousness Unit-Links are established all at once simultaneously.

On the other hand, the first Contingent Rule which is established contingently according to the condition of the way of arrangement of secondary convergent dense set 1405 activates Cognitive Rule created in the convergent dense set 1401, thereby making up Definite Unit-Link 1413, and the second Contingent Rule handles the Revelation (1415) action, and the third Contingent Rule handles the Association action. This is the Providence of Existence.

Therefore, the starting point of the embodiment of existence phenomenon is surely Definite Unit-Link 1413, but it is meant that the Consciousness Unit-Link which accepts the Revelation 1415 of the Definite Unit-Link has already been established. Thus, the process which takes Consciousness Unit-Link as the starting point shall satisfy the Providence of Existence.

That is, as shown by Fig. 21, with Definite Unit-Link 1413, a slice of the semantic quality of Consciousness Unit-Link viewed from Definite meaning-space 705. It is duplicated to Event meaning-space 707 and with Event Unit-Link 1417, an inducement of a slice of semantic quality of the Consciousness Unit-Link viewed from the Event meaning-space 707 and a synthesis of a slice induced by the Definite Unit-Link 1413 are implemented. Next, with Equivalent Unit-Link 1417, an inducement of a slice of significance of the Equivalent meaning-space 709 and a synthesis of slices induced by both Definite Unit-Link 1413 and Event Unit-Link 1417 are implemented.

The Spatial Simulation shown in Fig. 22 represents a vector synthesis of the relation shown in Fig. 21, which is explored into a solid surface diagram.

The relationship between Consciousness Unit-Link's semantic quality and Natural Unit-Link's semantic quality, obtained in this way, becomes synonymous with the representation of the Associative Equation by the following expression:

$$ri = Tij^{-} (rj)$$

This is called 'Synchronous Equation'. That is, it is meant that the semantic quality rj of the word which identifies existence phenomenon that can be specified in Natural meaning space 701 is grasped as the semantic quality of Consciousness Unit-Link in Consciousness meaning-space 703 through the reverse process from Coupling to Revelation.

The $Tij^{-}$ function of this Synchronous Equation is called 'Scenario Function' as aforementioned and it is expressed by the following expression:

$$T0 = \Phi0 (+ \{\Phi p\{ \quad , L2(k, i) , P2(j)\} \}k$$

$$+ \Phi p \{ Y3(k, i) , L3(k, i) , P3(j), T1(f)\}$$

$$+ \{\Phi p \{Y4(k, i) , L4(k, i) , P4(j)\}\} k)$$

In this Scenario Function, the following definition is made:

XVI. Φ0: The logical structure of Idea Rule which rules the creation of a divergent structure to induce Divergent Rule and a convergent structure to induce Convergent Rule.
XVII. Φp: The logical structures of Convergent Rule and Contingent Rule which create Definite meaning-space, Event meaning-space and Equivalent meaning-space.
XVIII. L2(k, i): The logical structure of Definite meaning-space which induces Definite Unit-Link that grasps a slice of Consciousness Unit-Link viewed from Definite meaning-space.
XIX. Y3(k, i): The logical structure of Revelation and Association which duplicates the slice of The logical structure of Event meaning-space which induces Event Unit-Link that grasps the slice of Consciousness Unit-Link viewed from Event meaning-space.
XX. Y4(k, i): The logical structure of Breakup and Regulation which duplicates the slice of Consciousness Unit-Link grasped by Definite Unit-Link and the slice of Consciousness Unit-Link grasped by Event Unit-Link, into Equivalent meaning-space.
XXI. L4(k, i): The logical Structure of Equivalent meaning-space which induces Equivalent Unit-Link that grasps the slice of Consciousness Unit-Link viewed from Equivalent Space.

Also, the independent variable i is an identifier that identifies Consciousness Unit-Link which is taking the Logical Atom assuming the Deuteronomy order i as its Equivalent Logical atom, and its semantic quality, and it is also an identifier with which the identifier j of the word to identify existence phenomenon that was embodied in Natural meaning-space 701 by the semantic quality is regarded equivalent to what is possessed by the Equivalent Logical Atom of the Consciousness Unit-Link.
That is, what is meant by this Scenario Function is that the semantic quality ri of the Consciousness Unit-Link in the Consciousness meaning-space 703 can be induced as universal by the identifier i of the word identifying the existence phenomenon in the Natural meaning-space.
The independent variable i is an identifier of the word that identifies the data field where the Consciousness Unit-Link's semantic quality ri is embodied as Natural Unit-Link's semantic quality ri (that is, data code), and it can be regarded as equivalent to the Deuteronomy order i of the Equivalent Logical Atom concerned with Consciousness Unit-Link. Accordingly, what is meant by this Scenario Function is that the inducement of the semantic quality ri concerned with Consciousness Unit-Link is made into a diagram which is a functional solution by means of the identifier i which identifies existence event that can be specified in Natural meaning-space. A diagram of functional solution means it doesn't belong to personal category but an answer can be obtained mechanically as univocally.
At the stage of this Scenario Function, however, it only induces software (i.e.,a relation of the 'requirement in a natural language' and the 'program composed of a series of codes', of software) without an entry of arbitrariness in the state enabling to specify as the univocal. In reality, what is required in the means to operate the algorithm of semantic quality inducement determined in this manner on the computer apparatus, which is a physical existence, and to materialize the prescribed function. The operation of the logical structure in the computer space is called the "Reduction' to the computer space by this invention (as aforementioned).
In the Reduction of this Scenario Function, the independent variables k and k are identifiers to specify media of Screen, Printouts and File in the information processing system, which is one of the Natural meaning-space 701, and the independent variable i is the identifier to specify data field prepared on the media. The existence phenomenon of data code which appeared on the data field of the media identified by this identifier is what has become semantic quality rj with which the univocal semantic quality ri assumed by the Consciousness Unit-Link possessing the Deuteronomy order i which is equivalent to the identifier has been embodied by the Coupling action and recognized by humans.
And, also, the elements consisting the right side of the Scenario Function L2(k, i), Y3(k, i), L3(k, i), Y4(k, i), and L4(k, i) are functional representations of the logical structure of Definite Unit-Link 1413, Revelation 1415, Association 1416, Event Unit-Link 1417, Regulation and Equivalent Unit-Link 1419, which creates Natural Unit-Link from the semantic quality ri assumed by the Consciousness Unit-Link that takes the identifier i as the Deuteronomy order i of the Equivalent Logical Atom, and the Reduced result is a program itself composed of codes.
And, the following names are given to them, respectively:

XXII. L2(k, i): Homogeneity Vector mounted on W02 Pallet
XXIII. Y3(k, i): Duplication Vector mounted on W03 Pallet
XXIV. L3(k, i): Homogeneity Vector mounted on W03 Pallet
XXV. Y4(k, i): Duplication Vector mounted on W04 Pallet
XXVI. L4(k, i): Homogeneity Vector mounted to W04 Pallet.

They are called 'Tense Control Vector' in general.

Further to add, in this invention, semantic quality assumed by Unit-Link is data code created in the data field on the main memory that takes Word Identifier as it address. Also, in this invention, the logical structure corresponding to the condition of Unit-Link and the establishment of Unit-Link is process logic identified by Word Identifier, and it is called Duplication Vector and Homogeneity Vector, which were represented by a functional expression. And, the result of their Reduction is a program itself composed of codes.

The Φp {( ), ( ), ( )} is called 'Pallet Function', which is a functional expression of the logical structure of Convergent Rule and Contingent Rule of the Providence of Existence. The result of Reduction is a program itself composed of codes.

In this Pallet Function, the subscript k represents the taking of Screen Identifier as independent variable, and the subscript i represents the taking of the identifier as independent variable against all media. The subscripts '2', '3' and '4' mean the establishment order of meaning-space, which correspond to the following respectively:

2: Definite meaning-space
3: Event meaning-space
4: Equivalent meaning-space.

The '{}' means an action to assemble each of elements within the '{}' and corresponds to the logical structure in which Convergent Rule creates Convergent Dense Set 1401 and its complementary set Secondary Convergent Dense Set 1405. Each of the assembled is called as follows:

Φp {2 }: W02 Pallet of Screen with identifier k
Φp {3 }: W03 Pallet
Φp { 4}: W04 Pallet of Screen with identifier k.

Further, the Φ0 ( + +) is an action of the Providence of Existence which was grasped by the Spatial Simulation, that is, a functional expression of the logical structure of Idea Rule in which Definite meaning-space 705 is established first, then Event Space 707, and Equivalent Space as last, thereby embodying existence phenomenon by space-duplicating semantic quality assumed by Consciousness Unit-Link. The result of their Reduction is a program itself composed of codes. This is called 'Pallet Chain Function'.

The '+' means the space-duplication is expressed as vector synthesis on the Spatial Simulation, and it is a symbol expressing an action to activate, in order, elements within the '()', that is, programs of 'Pallet'.

This Scenario Function expressed in diagram is a software requirement document called Homogeneity Map, which is an object of the present invention, and on the Homogeneity Map, the inscription is expressed by connecting lines which connect between each Pallet.

As aforementioned, Pallet Chain Function may as well be referred to as what satisfies sufficient conditions necessary to realize Homogeneity Map and Tense Control Vector.

<Various points of the logical structure of Pallet Chain Function and their theoretical base>

According to the Providence of Existence of the present invention, there is Incomprehensible meaning-space 713 as an origin to cause the embodiment of existence phenomenon, and when the origin Logical Atoms existing latent infinitely in the space make duplication autonomously targeting existence, the Logical Atom creates divergent structure and convergent structure of its complementary set, by Idea Rule.

In the divergent structure, Divergent Rule is created from the rule of existence, and, by the Divergent Rule, Divergent Dense Set 1301 and Secondary Divergent Dense Set 1302 of its complementary set are created. In the divergent dense set, Consciousness Rule is created. Also, Volition Rule which attempts to realize the inducement of Consciousness Unit-Link by the Consciousness Rule is created in the Secondary Convergent Dense Set 1302. By the Volition Rule, Consciousness Unit-links are created all at once. Semantic quality assumed by this Consciousness Unit-Link becomes the origin of all existence phenomenon.

In the convergent structure, too, Convergent Rule is created from the rule of existence, and, by the Convergent Rule, Convergent Dense Set 1401 and Secondary Convergent Dense Set 1405 of its complementary set are created.

In the convergent dense set 1401, Cognition Rule is created. Also, Contingent Rule which attempts to materialize Definite Unit-Link 1413 by the Cognition Rule is created in the Secondary Convergent Dense Set 1405. Taking the occasion of the materialization of Definite Unit-Link which is realized by the Contingent Rule, the following process is inevitably implemented, including Revelation to Consciousness Unit-Link, Association from Consciousness Unit-Link, the creation of Event Unit-Link 1417 by Association, Regulation from Event Unit-Link 1417, the creation of Equivalent Unit-Link 1419 by Regulation, the Coupling of Equivalent Unit-Link 1419, and the creation of Natural Unit-Link by Unitization of the Coupling. The very Natural Unit-Link is the existence phenomenon itself in which semantic quality assumed by the Consciousness Unit-Link has embodied. This theory is the background principle to realize this invention.

Hereupon, Idea Rule corresponds to Pallet Chain Function 709, and it assumes the roles including the activation of W02 Pallet which imitates the creation of Definite meaning-space 705, the activation of W03 Pallet which imitates the creation of Event meaning-space 707, and the activation of W04 Pallet which copies the creation of Equivalent meaning-space 709.

Then, Convergent Rule and Contingent Rule correspond to Pallet Function, and the Convergent Rule assumes assembly of Tense Control Vectors which simulate the creation of Convergent Dense Set 1401. Further, because the Convergent Dense Set 1401 is a set of Logical Atoms composed of the duplicate permutation, Unit-Link cannot be induced to the set of duplicated Logical Atoms. For this reason, so as to satisfy the Providence of Existence by the inducement of Unit-Link, the Pallet Function also assumes the roles of activating and re-activating Cognition Rule which is established by Contingent Rule that was created as a result of autonomous examination on whether the creation of Contingent Rule is possible or not in the Secondary Convergent Dense Set 1405 arranged in the descending order in terms of semantic space diameters possessed by Cognitive Logical Atoms.

As already explained, Pallet Chain Function is the element consisting of Scenario Function. In information processing system, it is necessary to Reduce the Scenario Function into the computer space, its logical structure shall be realized as a program composed of a series of codes.

Here, to build information processing system, the purposed is to obtain effects of the system operation. In the beginning of the operation, an operation of human issuance of command is always accompanied. To continue the operation thereafter, human operation is always implemented at important points. The codes which direct a computer to operate information processing system with such a nature as prescribed is so-called a program. In such a program, the process sequence by the traditional methods is generally input process at first, then conversion process, and output process as last. That is, it is a thinking that, with human input operation as the beginning, system operation is started and continued.

However, in this invention, the following standpoint is taken that such human input operation is also a phenomenon of existence, and the origin of the existence phenomenon is nothing but semantic quality of Consciousness Unit-Link, and it is embodied into Natural meaning-space 701 of a human by the action of the Providence of Existence. Then, it means that, also in information processing system which is the Providence of Existence that was Reduced into the computer space, the semantic quality of existence phenomenon of the input operation must already be latent as a Reduced product of Consciousness Unit-Link.

That is, a phenomenon of human input operation can be grasped as an expression of a volition desiring the adjustment to the already-latent semantic quality created by the Reduction into the computer space (this adjustment is called 'synchronization' by this invention).

Fig. 54 is a flowchart for explainging the logical structure of Pallet Chain Function.

As shown by this Fig., the essence of human input operation (step 5425) is thought to be that an already-latent existence, equivalent to the semantic quality, was embodied (step 5421), and it has become existence phenomenon through human recognition (step 5423), and it is desired to synchronize with the existence phenomenon 5423. From another point of view, this input operation 5425 corresponds to the Deuteronomization of Logical Atoms from the Incomprehensible meaning-space 713. This is because the Deuteronomization becomes the commencement of behaviors of the Providence of Existence beginning with the inducement of Consciousness Unit-Link that becomes the origin of existence phenomenon inducing input operation, then the creation of semantic quality, and leading to the inducement of Definite Unit-Link 1413, Event Unit-Link 1417 and Equivalent Unit-Link 1419 so as to make the semantic quality as existence phenomenon in Natural meaning-space 701, thereby semantic quality assumed by those Consciousness Unit-Link is embodied as Natural Unit-Link.

That is, as shown in the same Fig., a volition desiring input operation so as to utilize information processing system is a result of the following: Semantic quality concerned with Consciousness Unit-Link that shall induce the volition is tried for embodiment by the Providence of Existence (step 5421), and as a result it becomes existence phenomenon (step 5423) and it is recognized by humans. And, this input operation (step 5425) corresponds to the Deuteronomization of new Logical Atoms from Incomprehensible meaning-space 713. This is because semantic quality concerned with existence phenomenon (step 5423) which induced input operation (step 5425) and semantic quality of a volition which is a result of recognizing the semantic quality are another new semantic quality.

Herein, in the new Deuteronomization of input operation (step 5425), the Providence of Existence begins the following action. That is, Idea Rule grasps the vital force assumed by the Deuteronomized Logical Atom, and determines the median point, that is, the Boundary Logical Atom, by comparing it with the force of the Logical Atom seated on the Position Locus until then. Because of this, the seating point of the Deuteronomized Logical Atom is determined, then it is seated.

Then, the condition of materializing dense structure, Unit-Link and Coupling, which existed until then, are once disintegrated, and all Logical Atoms are re-created as a convergent set, which is a divergent structure and its complementary set, by the new condition created by the Deuteronomization.

The 'Receive function' (step 5427) in Fig. 54 is a function of Pallet Chain Function which simulates a logic of creating Convergent Structure based on this Idea Rule. The convergent structure created by this function corresponds to the data structure received from Screen to the data field of the main memory.

Now, in the convergent structure, Convergent Rule is inevitably created and activated by Idea Rule. The 'relevant activation of the corresponding W02 Pallet' (step 5431) in Fig. 54 is a function of Pallet Chain Function which imitates a logic of activating Convergent Rule by this Idea Rule. The activated 'W02 Pallet' means a program on which Pallet Function and Homogeneity Vector are mounted so as to imitate logic of creating Definite Unit-Link by Convergent Rule, Contingent Rule and Cognition Rule.

Hereupon, when Definite Unit-Link is created, the Providence of Existence implements an action of creating Event Unit-Link through Revelation by the second Contingent Rule and Association by the third Contingent Rule. In order to materialize this action, the Idea Rule activates the second Convergent Rule and the third Convergent Rule.

The 'activation of the corresponding W03 Pallet' (step 5435) in Fig. 54 is a function of Pallet Chain Function which imitates a logic of activating the second and third Convergent Rule by Idea Rule altogether. The activated 'W03 Pallet' means a program on which Pallet Function, Duplication Vector and Homogeneity Vector are mounted so as to copy a logic of the creation of Event Unit-Link through the Revelation of Definite Unit-Link to the Consciousness Unit-Link and the Association form the Consciousness Unit-Link caused by Convergent Rule, Contingent Rule and Cognition Rule.

As a result of this W03 Pallet operation, semantic quality is induced for the first time by Consciousness Unit-Link, that is, W03 Homogeneity Vector, when data code is not existent in the data field of medium of Screen, for example, that is, semantic quality of the word has not been embodied, and depending upon necessity, the semantic quality is referred to data code in the data field of medium of File by the W03 Commad Action Vector.

On the other hand, when data code is existent in the data field of medium of Screen, for example, that is, semantic quality of the word has already been embodied, the data code of semantic quality is memorized by the W03 Duplication Vector into the data field of the main memory which is identified by the Word Identifier, and depending upon necessity, it is registered into the data field of the medium of File by the W03 Command Action Vector.

Now, when Event Unit-Link 1417 is created, the Providence of Existence implements an action of creating Equivalent Unit-Link 1419 through the Regulation by the fourth and fifth Contingent Rule. In order to materialize this action, Idea Rule activates the fourth and fifth Convergent Rule.

The 'activation of the corresponding W04 Pallet' (step 5419) in Fig. 54 is a function of Pallet Chain Function which simulates logic of activating the fourth and fifth Convergent Rule by Idea Rule altogether. The activated 'W04 Pallet' means a program on which Pallet Function, Duplication Vector and Homogeneity Vector are mounted so as to simulates a logic of the creation of Equivalent Unit-Link caused by the Breakup and Regulation of Event Unit-Link 1417 by Convergent Rule, Contingent Rule and Cognition Rule. As a result of this W04 Pallet operation, edit is implemented so as to embody Event Unit-Link, that is, semantic quality of the word induced by the W03 Homogeneity Vector.

Now, when Equivalent Unit-Link 1419 is created, the Providence of Existence implements an action of creating Natural Unit-Link through the Coupling by the sixth and seventh Contingent Rule. In order to materialize this action, Idea Rule activates the fourth Convergent Rule as well as activates the fifth Convergent Rule. The 'Send function' in Fig. 54 (step 5421) is a function of Pallet Chain Function which simulates a logic of activating the sixth and seventh Convergent Rule by Idea Rule altogether. By this 'Send function' (step 5421), significance of the Consciousness Unit-Link is embodied in Natural meaning-space 701, that is, Screen, and is recognized by humans as a new existence phenomenon.

Mentioned above are major logical structures of Pallet Chain Function which simulates Idea Rule. Further to add, the process box and judgment box which did not appear in the above explanation are derivative logic accompanying the Reduction of the Providence of Existence into the computer space.

This derivative logic is explained in the following.

The 'Send information determination' (step 5403) in Fig. 54 is a logic to rule the determination of Equivalent Unit-Link created by Breakup and Regulation of Event Unit-Link.

The clues leading to this 'Send information determination' (step 5403) is the following four kinds: 'Pallet Chain Function Φ0 Start' (step 5401), 'Receive normal 5429 is FALSE' (step 5430), 'After-input-operation directed Pallet is not W03 Pallet, in its Activate 5433' (step 5434) and 'Direction after W03 Pallet Activate' (step 5437).

Hereupon, the Send information from the 'After-input-operation Pallet is not W03 Pallet, in its Activate 5433' (step 5434) is determined by the directive information from the Signification Vector of the word of the operational key (or directive command) belonging to the Screen of the post-input-operation of the Pallet which is checked with 'W03 Pallet' (step 5433).

Also, the Send information from the 'Direction after W03 Pallet Activate' (step 5437) is determined by the directive information from the Routing Action Vector which is mounted on the W03 Pallet.

Also, the Send information from the 'Receive normal 5429 is FALSE' (step 5430) is determined by the check information which is a process result of the Receive function (step 5427).

Also, the Send information from the 'Pallet Chain Function Φ0 Start' (step 5401) is determined by whether the flag which manages system is in the initial state or not.

After the 'Send information determination' (step 5403), if the Send information is 'System Blockade' (step 5405) it means the role of the Providence of Existence is terminated, which has been reduced into the computer space. That is, Incomprehensible meaning-space 713 and Idea meaning-space 711 have reached a stable state.

That Incomprehensible meaning-space 713 and Idea meaning-space 711 have reached a stable state means both Incomprehensible Space 713 and Idea Space 711 have become in the same state, which cannot be distinguished, that is, there is neither change nor movements.

Consequently, in this instance, it represents the same state as a system blockade synonymous with the thermal death of the second rule of entropy, that is, blockade of the system (step 5407).

The 'No system blockade' (step 5409) is to continue the Providence of Existence. And, if the Send information that directs its continuation is not Walk-Through, that is, the FALSE of 'In-WT Continue' (step 5410) means the disintegration of various kinds of Unit-Links caused from the Definite Unit-Link existent for the time being and the start from a new Deuteronomization.

The start from this new Deuteronomization means to display the Screen to recognize existence phenomenon (step 5423) that induces a new input operation (synchronization) (step 5425), and for that purpose, it is necessary to prepare environments in advance so as to enable the establishment of various kinds of Unit-Links concerned with the embodiment of existence phenomenon of Screen Display. The preparation of environments enabling the establishment of various kinds of Unit-Links that correspond to the embodiment of existence phenomenon of Screen Display concerned with this new Deuteronomization is the 'relevant In-WT all Pallets Set' (step 5411), and this is a logic that makes semantic quality of all Pallets belonging to relevant Walk-though as objects to be managed.

On the other hand, in the 'No system blockade' (step 5409) and when the Send information is within Walk-Through as well, that is, if TRUE of the 'In-WT continuation' (step 5412), it becomes necessary to examine whether to proceed with the creation of Equivalent Unit-Link by disintegrating various kinds of Unit-Link from the current Definite Unit-Link 1413 or to proceed with the creation without disintegration.

For example, the synchronization has been established by Event Unit-Link 1417 and the result of the synchronization is reported by means of initializing Screen. Or the synchronization has not been established and the result of synchronization is reported to Screen by means of continuing the results of Definite Unit-Link 1413 and Event Unit-Link 1417 as they are.

An examination for such a purpose takes a logic of 'Scenario Unit-Link Needed' (step 5413). And, when Scenario Unit-Link is needed, the logic of 'Scenario Unit-Link' (step 5415) is implemented so as to continue the result of Definite Unit-Link 1413 and Event Unit-Link 1417 as it is, and when Scenario Unit-Link is not needed, various kinds of Unit-Link from the current Definite Unit-Link 1413 are disintegrated and, in order to report it by means of the Screen initialization, the logic of 'Area Initialization (step 5417) is implemented.

<The theoretical base of the logical structure of Pallet Chain Function becoming the univocal is conformed to the law of the Providence of Existence>

As explained above, the logical structure of Pallet Chain Function represents only the role of Idea Rule of the Providence of Existence in the form of program composed of a series of codes so as to Reduce it into the computer space, and a theoretical base of even up to 1 statement follows the Providence of Existence, thereby not allowing an entry of a product of personal ideas at all.

4.4.4. Pallet Function

<Aims of the present invention to be claimed by Pallet Function>

The Pallet Function was invented both as the Homogeneity Map, a means of enabling to univocally determine all kinds of software (the relation between the 'natural language requirement' of software and the 'program composed of a series of codes), and as a logical structure to support necessary and sufficient condition possessed by the Tense Control Vector.

<The meaning of 'The Pallet Function supports necessary and sufficient condition possessed both by the Homogeneity Map and by the Tense Control Vector'>

This invention, as aforementioned, goes back up to the domain of the depths of consciousness that is thought to be situated in the root of giving a meaning to recognize existence phenomenon as it is, and considers that there is a meaning structure of creating what becomes of a meaning of word, that is, of creating a univocal semantic quality, into the Consciousness meaning-space, and by taking it as an origin the semantic quality is embodied irreversibly in the Natural meaning-space 701, thereby becoming existence phenomenon and given a meaning (that is, recognized), the process of which is the very scheme leading to the determination of software.

This process was made into algorithm and is called 'Associative Equation', which is a theoretical expression of the present invention. The Associative Equation is as explained before.

This Associative Equation is invisible existence to humans, who belong to Natural meaning-space 701, in that it takes independent variables both of the Deuteronomy order i of the Equivalent Logical Atom concerned with Consciousness Unit-Link in Consciousness meaning-space 703 which is a theoretical space, and of the semantic space diameter ri of the Consciousness Unit-Link. Accordingly, it is impossible to specify the independent variables directly on this equation and they must be handled only as abstract variables.

Thereupon, by expressing the relation of Consciousness meaning-space 703 and natural meaning-space 701 by means of the Spatial Simulation devised artificially, it is necessary to make up a function

$$ri=Tij^{\overline{\ \ }}(rj)$$

by using independent variable rj that can be specified in Natural meaning-space 701 so as to grasp the semantic quality ri of Consciousness meaning-space.

The function obtained in such a manner is the Scenario Function and it is expressed by the following expression.

$$T0 = \Phi 0(+ \{\Phi p \{ \qquad , L2(k, i) , P2(j)\} \}k$$

$$+ \Phi p \{ Y3(k, i) , L3(k, i) , P3(j), T1(f)\}$$

$$+ \{\Phi p \{Y4(k, i) , L4(k, i) , P4(j)\}\} k)$$

At the stage of this Scenario Function, however, it is not more than merely determine the relation between the 'natural language requirement' and the 'program composed of a series of codes' of software as univocal. In reality, required is the means to operate this semantic quality-inducing algorithm (logical structure) determined in this manner on the computer and to actualize the prescribed function. To operate the logical structure into the computer space is called 'Reduction' to the computer space by the present invention as aforementioned.

In the Reduction of this Scenario Function, the independent variables k and k are identifiers to specify media of Screen, Printouts and File in the information processing system, which is one of the Natural meaning-space 701, and the independent variable i is the identifier to specify data field prepared on the media. And, the existence phenomenon of data code which appeared in the data field of the media identified by this identifier is what has become semantic quality rj with which the univocal semantic quality ri assumed by the Consciousness Unit-Link possessing the Deuteronomy order i which is equivalent to the identifier has been embodied by the Coupling action and it becomes existence phenomenon rj through recognition of humans who went through the same process.

And, also, the elements consisting of the right side of the Scenario Function L2(k, i), Y3(k, i), L3(k, i), Y4(k, i), and L4(k, i) are functional representations of the logical structure of Definite Unit-Link 1413, Revelation 1415, Association 1416, Event Unit-Link 1417, Regulation and Equivalent Unit-Link 1419, which creates Natural Unit-Link from the semantic quality ri assumed by the Consciousness Unit-Link that takes the identifier i as the Deuteronomy order i of the Equivalent Logical Atom, and the Reduced result is a program itself composed of codes. They are called as follows respectively, as already explained:

XXVII. L2(k, i): Homogeneity Vector mounted on W02 Pallet
XXVIII. Y3(k, i): Duplication Vector mounted on W03 Pallet
XXIX. L3(k, i): Homogeneity Vector mounted on W03 Pallet

XXX. Y4(k, i): Duplication Vector mounted on W04 Pallet
XXXI. L4(k, i): Homogeneity Vector mounted on W04 Pallet.

They are called 'Tense Control Vector' in general.

<Various points of the logical structure of Pallet Function and their theoretical base>

According to the Providence of Existence of the present invention, there is Incomprehensible meaning-space 713 as an origin to cause the embodiment of existence phenomenon, and when Primitive Logical Atoms existing latent infinitely in the space make duplication autonomously targeting existence, the Logical Atom creates divergent structure and convergent structure of its complementary set, by Idea Rule.

In the divergent structure, Divergent Rule is created from the rule of existence, and, by the Divergent Rule, Divergent Dense Set 1301 and Secondary Divergent Dense Set 1302 of its complementary set are created. In the divergent dense set 1301, Consciousness Rule is created. Also, Volition Rule which attempts to realize the inducement of Consciousness Unit-Link by the Consciousness Rule is created in the Secondary Convergent Dense Set 1302. By the Volition Rule, Consciousness Rule is activated and Consciousness Unit-Links are created all at once. Semantic quality assumed by this Consciousness Unit-Link becomes the origin of all existence phenomenon.

In the convergent structure too, Convergent Rule is created from the rule of existence, and, by the Convergent Rule, Convergent Dense Set 1401 and Secondary Convergent Dense Set 1405 of its complementary set are created. In the convergent dense set 1401, Cognition Rule is created. Also, Contingent Rule which attempts to materialize Definite Unit-Link 1413 by the Cognition Rule is created in the Secondary Convergent Dense Set 1405. Taking the occasion of the materialization of Definite Unit-Link which is realized by the Contingent Rule, the following process is inevitably implemented, including Revelation to Consciousness Unit-Link, Association from Consciousness Unit-Link, the creation of Event Unit-Link 1417 by Association, Regulation from Event Unit-Link 1417, the creation of Equivalent Unit-Link 1419 by Regulation, the Coupling of Equivalent Unit-Link 1419, and the creation of Natural Unit-Link by Unitization of the Coupling. The very Natural Unit-Link is the existence phenomenon itself in which semantic quality assumed by the Consciousness Unit-Link has embodied. This theory is the background principle to realize the present invention.

Hereupon, Idea Rule corresponds to Pallet Chain Function, and it assumes roles of action including the activation of W02 Pallet which imitates the creation of Definite meaning-space 705, the activation of W03 Pallet which imitates the creation of Event meaning-space 707, and the activation of W04 Pallet which imitates the creation of Equivalent meaning-space 709.

Convergent Rule and Contingent Rule correspond to Pallet Function, and the Convergent Rule assumes the assembly of Tense Control Vectors which simulate the creation of Convergent Dense Set 1401. Further, because the Convergent Dense Set 1401 is a set of Logical Atoms composed of the duplicate permutation, Unit-Link cannot be induced to the set of duplicated Logical Atoms. For this reason, so as to satisfy the Providence of Existence by the inducement of Unit-Link, the autonomous examination is implemented on whether the creation of 'Contingent Rule' is possible or not in the 'Secondary Convergent Dense Set' arranged in the descending order in terms of semantic space diameters possessed by Cognitive Logical Atoms. Pallet Function also undertakes this checking action as well as the activation and re-activation of Cognitive Rule caused by the created Contingent Rule.

As already explained, Pallet Function is the element consisting of Scenario Function. In information processing system, it is necessary to Reduce the Scenario Function into the computer space, so its logical structure shall be realized as a program composed of a series of codes.

Here, in establishing an information processing system, the purposed is to obtain effects of system operation. In the beginning of the operation, an operation of human issuance of command is always accompanied. Also, to continue the operation thereafter, human operation is always implemented at important points. The codes which direct a computer to operate information processing system of such a nature as prescribed, is a so-called program. In such a program, the process sequence by the traditional methods is generally an input process at first, then conversion process, and output process as last. That is, it is a thinking that, with human input operation as the beginning, system operation is started and continued.

In the present invention, however, the following standpoint is taken that such a human input operation is also a phenomenon of existence phenomenon, and the origin of the existence phenomenon is nothing but semantic quality of Consciousness Unit-Link, and it is embodied into Natural meaning-space 701 of a human by the action of the Providence of Existence. Then, it means that, also in information processing system which is the Providence of Existence that was Reduced into the computer space, the semantic quality of existence phenomenon of the input operation must already be latent as a Reduced product of Consciousness Unit-Link.

That is, a phenomenon of human input operation can be grasped as an expression of a volition desiring the adjustment to the already-latent semantic quality created by the Reduction into the computer space (this adjustment is called 'synchronization' by this invention). That is, 'already latently existing' means what corresponds to the semantic quality was embodied and became existence phenomenon through human recognition, and in this sense the essence of human input operation is thought of as the desire to synchronize with the existence phenomenon.

From another point of view, this input operation 5425 corresponds to the Deuteronomization of Logical Atoms from the Incomprehensible meaning-space 713. This is because the Deuteronomization becomes the commencement of behaviors of the Providence of Existence beginning with the inducement of Consciousness Unit-Link that becomes the origin of existence phenomenon inducing input operation, then the creation of semantic quality, and leading to the inducement of Definite Unit-Link 1413, Event Unit-Link 1417 and Equivalent Unit-Link 1419 so as to make the semantic quality as existence phenomenon in Natural meaning-space 701, thereby semantic quality assumed by those Consciousness Unit-Link is embodied as Natural Unit-Link. That is, as shown in Fig. 54, a volition desiring input operation (step 5425) so as to utilize an information processing system is a result of the following: Semantic quality concerned with Consciousness Unit-Link that shall induce the volition is tried for embodiment by the Providence of Existence (step 5421), and as a result it becomes existence phenomenon (step 5423) and it is recognized by humans. And, this input operation (step 5425) corresponds to the Deuteronomization of new Logical Atoms from Incomprehensible meaning-space 713. This is because semantic quality concerned with existence phenomenon (step 5423) which induced input operation (step 5425) and semantic quality of a volition which is a result of recognizing the semantic quality are another new semantic quality.

Hereupon, against the newly Deuteronomized Logical Atoms, Idea Rule grasps the vital force assumed by the Logical Atom and determines the median point, that is, the Boundary Logical Atom, by comparing it with the force of the Logical Atom seated on the Position Locus until then. Because of this, the seating point of the Deuteronomized Logical Atom is determined, then it is seated. Then, various kinds of then-current dense sets, Unit-Links and Couplings are partly disintegrated by Idea Rule. Then, all Logical Atoms are re-created as a convergent set, which is a divergent structure and its complementary set, with a new condition.

The 'Receive function' (step 5427) in Fig. 54 is a function of Pallet Chain Function which imitates a logic of creating Convergent Structure based on this Idea Rule. The convergent structure created by this function corresponds to the data structure received from Screen to the data field of the main memory. It determines data structure which imitates convergent structure that becomes a base for creating Consciousness Unit-Link which will become an origin of existence phenomenon having induced input operation and creating semantic quality as well. That is, Screen data is received in the data field of the main memory.

Now, in the convergent structure in Fig. 15, Convergent Rule is created inevitably and activated by Idea Rule. The 'activation of the corresponding W02 Pallet' (step 5431) in Fig. 54 is a logic of Pallet Chain Function which simulates Convergent Rule Activate by Idea Rule. An examination is implemented on the creation of Definite Unit-Link 1413 which does Revelation to Consciousness Unit-Link that will become an origin of existence phenomenon which induced an input operation. The activated Convergent Rule converts self's convergent structure into convergent dense set 1401 and its complementary set, that is, secondary convergent dense set 1405, and Contingent Rule created in the secondary convergent dense set 1405 activates Cognitive Rule created in the convergent dense set 1401, thereby proceeding to create Definite Unit-Link 1413.

Hereupon, Convergent Rule and Contingent Rule correspond to Pallet Function of W02 Pallet, and convergent dense set 1401, secondary convergent dense set 1405 and Cognitive Rule correspond to W02's Tense Control Vector.

Fig. 55 is a flowchart for explaining movements of the logical structure of Pallet Function which is placed on W02 Pallet.

As shown by the Fig., the activation of Convergent Rule by Idea Rule is synonymous with the start of the Pallet Function in W02 Pallet (step 5501),

The activated Convergent Rule converts convergent structure into convergent dense set 1401 and its complementary set, secondary convergent dense set 1405. In these two sets, convergent dense set 1401, secondary convergent dense set 1405 and Cognitive Rule correspond to the Tense Control Vector of W02 Pallet. That is, it means that, by Pallet Function of W02 Pallet, Tense Control Vectors have been assembled to be a set.

Hereupon, because the Convergent Dense Set 1401 is a set of 'Logical Atoms' composed of the duplicated permutation, Unit-Link cannot be created to the set composed of duplicated Logical Atoms. For this reason, so as to satisfy the Providence of Existence by the creation of Unit-Link, autonomous examination is implemented on whether Contingent Rule can be created or not in the Secondary Convergent Dense Set which is arranged in the descending order in terms of semantic space diameters possessed by Cognitive Logical Atoms. This corresponds to the 'Pallet Vector Activate Condition' (step 5507) check by Pallet Function and to the ' Restart Flag Set Done' (step 511) check. That is, the contents of this examination is whether it is convergent dense set with conditions to enable the creation of Definite Unit-Link that can be Revealed to Consciousness Unit-Link in which the Kuh is established or not.

This is the examination whether it is convergent dense set 1401 with possibility of being Definite Unit-Link that grasps Consciousness Unit-Link in which the 'Kuh' is established or not. In this check, if it is judged as Secondary Convergent Dense Set 1405 with possibility of being Definite Unit-Link which grasps Consciousness Unit-Link in which

the Kuh is established, Convergent Rule prompts the creation of Contingent Rule against the Secondary Convergent Dense Set 1405. The prompt of this Contingent Rule creation corresponds to the 'Tense Control Vector Activate' (step 5509) by Pallet Function.

In this 'Tense Control Vector Activate' (step 5509), all Tense Control Vectors start to operate randomly, regardless of their sequence. This is because the Convergent Rule's creating condition of the Secondary Convergent Dense Set 1405, which is convergent dense set 1401 and its complementary set, is a simple gathering of $3^{(\gamma-1)}$ pieces of logical atoms.

The activation of Cognitive Rule by Contingent Rule to be created in the Secondary Convergent Dense Set 1405 corresponds to the start of the Homogeneity Vector which has been mounted on W02 Pallet.

Hereupon, if the Providence of Existence is observed, the activated Cognitive Rule can always create Definite Unit-Link 1413, but this invention handles the concept of software which has Reduced the Providence of Existence into the computer space, so situations that can never happen with the Providence of Existence may occur. That is, notwithstanding the Providence of Existence stands on the irreversibility as its axiom, the data input action can be a reversible action of attempting synchronization by returning the existence, which has already become existence phenomenon, back to the previous state. This is an action betraying its axiom.

Betraying the axiom means that there will be the possibility of being FALSE. Therefore, in reality, there must not be logical structure enabling the inevitable creation of Definite Unit-Link 1413. Based on such a background, in Tense Control Vectors mounted on W02 Pallet which is Secondary Convergent Dense Set 1405 that is supposed to have Reduced the providence of Existence into the computer space, necessitated is the examination on whether it is Convergent dense set 1401 with possibility of being Definite Unit-Link 1413 that grasps Consciousness Unit-Link in which the Kuh is established, and if there is such a possibility, then it will be necessary to reconfirm whether it will materialize without fail or not.

The examination whether it is convergent dense set 1401 with a possibility of being Definite Unit-Link 1413 grasping Consciousness Unit-Link in which the Kuh is established or not is handled by the forefront judgment box 'Empty' of the Tense Control Vector mounted on W02 Pallet (step 4406), and the re-check on, in case there is such a possibility, whether it will materialize without fail or not is handled by the second box 'Attribute Examination' (step 4407).

The TRUE of the forefront judgment box 'Empty' (step 4406) means it is the convergent dense set 1401 of the Definite Unit-Link 1413 which always grasps Consciousness Unit-Link in which the Kuh is established, thereby satisfying the irreversible axiom. That is, it is synonymous with that data code is not existent in the data field which belongs to the Screen identified by Screen Identifier and is identified by Word Identifier.

Therefore, the examination of the forefront judgment box 'Empty' of the Tense Control Vector mounted on W02 Pallet (step 4406) assumes a logic which checks on the presence of data code in the W02 Pallet's data field which is identified by the Word Identifier equivalent to the Deuteronomy order of the Equivalent Logical Atom concerned with Consciousness Unit-Link creating semantic quality, which shall be grasped by Definite Unit-Link 1413.

In this way, the creation of Definite Unit-Link 1413 is tried by the Tense Control Vector mounted on W02 Pallet, but, on the Providence of Existence, the Consciousness Unit-Link in which the Kuh is established cannot always be created. In such an instance, the re-try is implemented by waiting a new Deuteronomization. This re-try judgment corresponds to the 'Restart Flag Set Done' (step 5511).

Next, upon completion of the process of all Tense Control Vectors, the 'Tense Control Vector End Flag Set' (step 5513) is implemented. Additionally, in order to confirm no missing of W02 Pallet processes, the 'End' (step 5517) is checked, and if no missing, the 'End Flag Set' (step 5517) is implemented, then the 'End Condition' (step 5503) is checked, thereby ending with W02 Pallet.

Fig. 56 is a conceptual diagram for explaining an action of the Providence of Existence from Revelation 1415 to Association 1416, the Pallet Chain Function in Scenario Function and the corresponding relation between Pallet Function and Tense Control Vector.

When Definite Unit-Link 1413 is created, the second Contingent Rule 5601 of the Secondary Convergent Dense Set 1405 which has been already created by the Convergent Rule activated by the Idea Rule reveals Definite Unit-Link 1413 to Consciousness meaning-space 703 (1415), and the Secondary Consciousness Rule 5607 that has been created in the Secondary Consciousness Set 5605, which is a complementary set of Consciousness Unit-Link5603, Associates (1416) the self's divergent dense set 1301 with the third convergent dense set 1401 of the Secondary Convergent Dense Set 1405. If the Association is established, the third Contingent Rule 5609 activates the self's Cognitive Rule 1403 and converts the convergent dense set 1401 into Event Unit-Link 1417.

Fig. 57 is a flowchart for explaining movements of the logical structure of Pallet Function which is mounted on W02 Pallet. The activation of Convergent Rule by Idea Rule is synonymous with the start of the Pallet Function in W03 Pallet (step 5701).

The completion of W02 Pallet operation means either of the following two kinds of state: Data is not existent in the data field which belongs to the Screen identified by Screen Identifier and is identified by Word Identifier and is waiting for the embodiment of a new existence phenomenon, or the synchronization is attempted by returning the existence, back to the previous state, which has already become existence phenomenon in the data field as semantic quality of data code by the data input action.

These two kinds of state always take a premise of the creation of Consciousness Unit-Link' in which the 'Kuh' is established. By applying such state to the Providence of Existence and in order to realize such a state by Reducing into the computer space, the action of Revelation is necessitated, that is, an action to allot Equivalent Logical Atoms of Definite Unit-Link into Equivalent Logical Atoms of Consciousness Unit-Link.

This action is realized by the Duplication Vector mounted in W03 Pallet. The action of Revelation is the action of Cognitive Rule which is activated by the second Contingent Rule, so this second Cognitive Rule corresponds to Duplication Vector, and the activation of the Duplication is handled by Pallet Function that imitates the second Cognitive Rule. Then, Association is implemented, and the action to follow is Event Unit-Link which is activated by the third Contingent Rule, and it is the Homogeneity Vector to be mounted on W03 Pallet. The activation of the Homogeneity Vector is handled by Pallet Function which imitates the third Contingent Rule. The 'Tense Control Vector Activate' (step 5719) in Fig. 57 is a logic corresponding to the activation of this Duplication Vector and Homogeneity Vector.

Further to add, the 'Tense Control Vector Activate Condition' (step 5717) check, the 'Restart Flag Set Done' (step 5721) check, and the 'Tense Control Vector End Flag Set' (step 5723) and 'End' (step 5735, 5739) check are the same as those of W02 Pallet, so explanation is omitted herein.

Now, the materialization of Revelation is synonymous with the creation of Consciousness Unit-Link in which the 'Kuh' is established. That is, data code is not existent in the data field, and as to the word in the state of waiting for the embodiment of a new existence phenomenon, the process moves to create Event Unit-Link 1417 by the next Association so as to create new semantic quality.

That. is, the third Contingent Rule starts to operate by the Association, and Cognitive Rule activated by the Contingent Rule creates Event Unit-Link 1417. Thus, this Cognitive Rule corresponds to Homogeneity Vector to be mounted on W03 Pallet, and the activation of the Homogeneity Vector is handled by Pallet Function which imitates the third Contingent Rule. In the 'Tense Control Vector Activate' (step 5719) in Fig. 57, a logic corresponding to the activation of this 'Homogeneity Vector'.

By the way, semantic quality created by Event Unit-Link 1417 with Homogeneity Vector's logic shall be created to the W03 Pallet's data field as a data code. The semantic quality created by this Event Unit-Link corresponds to the semantic space diameter of divergent dense set 1301 which is an element of Consciousness Unit-Link in which the 'Kuh' is established. It can be obtained by through the operation of the total sum of semantic space diameters of individual Logical Atoms consisting of divergent dense set 1301, or through the substitution of the value equivalent to the semantic space diameter of the Equivalent Logical Atom which is an element of Consciousness Unit-Link.

To enable to create the value of a semantic space diameter, the semantic space diameter must already exist in the data field of the main memory. The medium of this main memory is only valid in the state of power supply ON, and in the state of power supply OFF, the already-existing semantic quality will disappear. For this reason, in information processing system, it is normally done to store the semantic quality, subject to exist in the main memory, into file on the File of magnetic recording medium.

So as to restore onto the main memory from the File of this magnetic recording medium, an adequate logical action is necessitated. This action corresponds to the 'READ-family Command Action Vector' of this invention. The '(READ-family Directive) Action Vector Activate Condition' (step 5707) check box, the '(READ- family Command) Action Vector Activate' (step 5709) process box and the 'Action Vector End Flag Set' (step 5711) process box, in Fig. 57, correspond to the logic to restore semantic quality from File, which is induced onto the main memory.

On the other hand, as to the word in the state of attempting synchronization by returning the existence back to the previous state, which has already become existence phenomenon, as semantic quality of data code, in the data field by data input operation, it is interpreted that the synchronization has been established because data code was copied to the W03 Pallet's data field by this Duplication Vector's logic. Accordingly, in this instance, it is necessary to stop the creation of Event Unit-Link 1417 by the next Association. The logic to stop this process is the forefront 'Empty' check box of Homogeneity Vector mounted on W03 Pallet.

By the way, the synchronization by Duplication Vector which has returned semantic quality of data code, back to the previous state, to the W03 Pallet's data field by data input operation is a medium of the main memory. The medium of this main memory is only valid in the state of power supply ON, whereas in the state of power supply OFF, the already-synchronized semantic quality will disappear. For this reason, in information processing system, it is normally done to store the semantic quality synchronized on the main memory into file on the File of magnetic recording medium. The logic to store the semantic quality synchronized on the main memory into File of this magnetic recording medium is an action of File Registration and File Update. This action is corresponded to the 'WRITE-family Command Action Vector' of the present invention.

The '(non-READ-family Command) Action Vector Activate Condition' (step 5731) check box, the '(non-REAK-family Command) Action Vector Activate' (step 5729) process box and the 'Action Vector End Flag Set' (step 5733) process box, in Fig. 57, correspond to the logic to store semantic quality into File, which was synchronized onto the main memory.

To materialize Consciousness Unit-Link's semantic quality onto the medium of File in this manner and when semantic quality is induced by processing plural Files and plural data records, the required Command Action Vector can be allotted by the Scenario Function of T1(f). The Pallet Chain Function of this instance is Φ1, and the Pallet Function is given by ϕp(r, 2), ϕp(rf, 3), ϕp(f, 4) and expressed by the following expression.

$$T1(f) = \Phi 1 (\{\Phi p\ (rf, 2)\ \{\qquad , L2(r, i)\ , P2(r,j)\ , P2(j)\}\}\ r$$

$$+ \Phi p\ (rf, 3)\ \{Y3(r, i)\ , L3(r, i)\ , L3(f, i)\ , P3(j))$$

$$+ \{\Phi p\ (fr, 4)\ \{Y3(f, i)\ , L4(f, j)\ , P4(f, j)\ , P4(j)\ \}\}\ f)$$

Hereupon, the r is 'Reference-family File Identifier', the P2(r) is 'non-READ-family Command) Action vector', the f is 'Registration and Update-family File Identifier', the p4(f) is '(non-READ-family Command) Action Vector', and the j is 'Structural Adjustment Action Vector Operator', 'Routing Action Vector Operator' and 'Work Requirement Action Vector Operator'.

Fig. 58 is a diagram for explaining the corresponding relation among the Providence of Existence's action from Association to Coupling, Pallet Chain Function in Scenario Function, W04 Pallet's Pallet Function and W04 Pallet's Tense Control Vector.

Every time Event Unit-Link 1417 is created, the vital force of Event meaning-space 707 with Event Unit-Link 1417 as its element breaks up Event Unit-Link 1417 (5801), creates $\beta^{\beta}$ pieces of the duplicated permutation from β pieces of Cognitive Logical Atoms which belong to the convergent dense set 1401 of Event Unit-Link 1417, and creates a set taking all of them as its element as a complementary set of Event Unit-Link 1417. This set is called Secondary Event Set 5803.

In each of elements of Secondary Event Set 5803, a rule is created, and it is called Secondary Event Rule 5805. Secondary Event Rule 5805 starts to operate upon creation and converts all the elements of Secondary Event Set 5803 into Unit-Link. This Unit-Link is called Equivalent Unit-Link 1419, and the creation of this Unit-Link is called Regulation 5807.

The Equivalent Logical Atom of Equivalent Unit-Link 1419 inherits the Equivalent Logical Atom of Event Unit-Link which is its origin, once proliferation is established. However, if the proliferation of the volume of $\beta^{\beta}$ pieces is not established, the next best Cognitive Logical Atoms to fulfill the number will substitute, thereby establishing the proliferation of the volume of $\beta^{\beta}$ pieces of Logical Atoms. Definite Unit-Link 1413 and Event Unit-Link 1417 are created by the action of Secondary Convergent Dense Set 1405's forefront Contingent Rule, third Contingent Rule and individual Cognitive Rule 1403, but Equivalent Unit-Link 1419 are created from Secondary Event Set 5803 and its Secondary Event Rule 5805, and the way of their creation is different.

The Logical Atom of Equivalent Unit-Link 1419 also consists of Cognitive Logical Atoms, the same as in Event Unit-Link 1417, but the reason the difference occurs between the creation method of Definite Unit-Link 1413 and Event Unit-Link 1417 and the creation method of Equivalent Unit-Link 1419 is that the intention of the Providence of Existence is in the state of synchronization with Incomprehensible meaning-space 713, that is, in the state of balance of the number of Logical Atoms with Incomprehensible meaning-space 713, so the synchronization with Consciousness meaning-space 703 must be avoided.

Every time Equivalent Unit-Link 1419 is created from Event Unit-Link 1417, Secondary Equivalent Set 5809 is created as a complementary set of Equivalent Unit-Link 1419 which is composed of the duplicated permutation by taking all Equivalent Unit-Links 1419 as its elements. In Secondary Equivalent Set 5809, each rule is created. It is called Secondary Equivalent Rule 5811. The Secondary Equivalent Rule 5811 starts to operate upon creation and compares semantic space diameters of individual Equivalent Logical Atoms of the forefront Equivalent Unit-Link 1419 and the second Equivalent Unit-Link 1419, and when the forefront one is larger, the two convergent dense sets 1401 inevitably correspond to the fourth and fifth Secondary Convergent Dense Set 1405. The Secondary Equivalent Rule 5811 activates Contingent Rules of the two convergent dense sets simultaneously, and the individual Contingent Rules activate their self's Cognitive Rule 1403.

Then, the two Cognitive Rules create a new Equivalent Unit-Link 1419 by taking the fourth convergent dense set 1401 as master and the fifth convergent dense set 1401 as servant. The inducement action of the Equivalent Unit-Link 1419 having this kind of master and slave relationship is called Coupling 5813. That is, the Coupling 5813 creates additional Unit-Link from the two Unit-Links which make Coupling. In this action, either one becomes the subject and takes the relation of integrating Unit-Link which becomes the subordinate.

When the Coupling 5813 of Equivalent Unit-Link 1419 is established, Secondary Equivalent Set 5809 is created in the same way as Equivalent Unit-Link 1419 is created from Event Unit-Link 1417 against the Event Unit-Link 1417 which made the Coupling 5813. In this way, in Equivalent meaning-space 709, Equivalent Unit-Link 1419 created from Event Unit-Link 1417 and Equivalent Unit-Link 1419 with Coupling 5813 co-exist, and become an object for Coupling 5813, respectively.

The Equivalent Unit-Link has the largest-number of Unit-Link in terms of the number to be created. However, Equivalent Logical Atoms of Equivalent Unit-Link 1419 are in duplication, so the semantic space diameter created by Equivalent Unit-Link 1419 is regarded as the smallest. In light of this relation, Equivalent meaning-space 709 is regarded as equivalent to Incomprehensible meaning-space 713.

The vital force of Equivalent meaning-space 709 makes Coupling (5813) of Equivalent Unit-Link 1419 and Unitizes upon five times' Coupling. The Unitized Equivalent Unit-Link is called 'Natural Unit-Link'. Sometime the case of the subject's integrating a part of the subordinate during the Coupling 5813 of Natural Unit-Link is called 'Memory', and the case of the subject's integrating all the subordinate is called 'Assimilation'.

The Coupling 5813 of Natural Unit-Link creates a phenomenon. This phenomenon is 'time,' that is, existence phenomenon called 'a mass' and 'the three-dimensional space', and in information processing system it corresponds to a phenomenon called Screen Display and Printouts Print.

Fig. 59 is a flowchart for explaining the logical structure of W04 Pallet Function which is placed on W04 Pallet.

On the extension of creation of the convergent structure by Idea Rule, Breakup, Regulation and Coupling are implemented, and Equivalent Unit-Link 1419 is induced thereabouts, leading to the Start (step 5901) of Pallet Function in W04 pallet. The creation of Equivalent Unit-Link is implemented as follows. That is, Idea Rule creates convergent structure. The convergent structure autonomously creates Convergent Rule. The Convergent Rule creates Secondary Convergent Dense Set. The fourth and fifth Contingent Rules induced to the Secondary Convergent Dense Set activate their self's Cognitive Rule. The activated Cognitive Rule creates Equivalent Unit-Link.

The meaning that the W03 Pallet's operation already ended is as follows: Consciousness Unit-Link in which the 'Kuh' is established has been induced and Equivalent Unit-Link is induced by the Creation and Regulation of Secondary Event Set 5803 by inheriting the Equivalent Logical Atom of the Event Unit-Link 1417.

The inheritance which contains the contents of this Breakup action is handled by Duplication Vector mounted on W04 Pallet. This, then, means that the logic of creating Secondary Event Set 5803 by the Breakup is Pallet Function, and the 'Tense Control Vector Activate' (step 5909) in Fig. 59 is a logic corresponding to the activation of this Duplication Vector. Further to add, the 'Tense Control Vector Activate Condition' (step 5907) check, the 'Restart Flag Set Done' (step 5911) check, and the 'Tense Control Vector End Flag Set' (step 5913) and the 'End' (step 5925, 5929) check are the same as those of W02 Pallet, so explanation is omitted herein.

From another point of view, the Breakup means the Equivalent Logical Atom concerned with one Event Unit-Link 1417 is disseminated into plural Event Unit-Link 1419's Equivalent Logical Atoms. In information processing system, this is synonymous with the situation where one data field that belongs to the medium of Screen can break into a plural of data fields. That is, it means to embody semantic quality through a medium of a new Screen. Such an action is ruled by the 'Routing Action Vector' mounted on 'W03 Pallet', and it corresponds to the '(non-READ-family Command) Action Vector Activate' (step 5729 in Fig. 57) process box.

Now, with a different view, Regulation and Coupling induce Unit-Link from Unit-Link. That is, semantic quality concerned with Event Unit-Link has been memorized and it didn't change, but it is synonymous with adding a new nature. Accordingly, on the basis that semantic quality concerned with Consciousness Unit-Link, in which the 'Kuh' is established, is existing, the process proceeds so as to add a new nature. This logic is the forefront 'Empty' check of the Homogeneity Vector mounted on W04 Pallet. Also, it is Pallet Function to activate such a Homogeneity Vector, and, in the 'Tense Control Vector Activate' (step 5909) in Fig. 59, a logic corresponding to the activation of this Homogeneity Vector is contained.

In accordance with the Homogeneity Vector's logic, the inducement of Equivalent Unit-Link 1419 is the adding of a nature against semantic quality, and, in information processing system, this can be, for example, making the data code that was created by W03 Pallet's Tense Control Vector be embodied into the data field of Screen just as it is, or attaching ',' for every three digits, specifying a particular color, or attaching message, etc. The logic corresponds to the second 'Embodiment Edit' process box of Signification Vector mounted on W04 Pallet.

On the other hand, the 'Scenario Function has been Reduced into the computer space' means that an action of reversibility that never happens in the Providence of Existence is implemented. So, an event of FALSE can exist. That is, it means that the 'Acceptance' check of the Homogeneity Vector mounted on W04 Pallet happens to become FALSE. In such an instance, it is necessary to notify this effect to the person who did the FALSE operation. Specifically, for example, a logic for adding message is necessitated. This logic corresponds to the 'Message-related Action Vector Activate' (step 5921) process box, the 'Message-related Action Vector Activate Condition' (step 5919) check box and the 'Action Vector End Flag Set' (step 5923) process box.

<The theoretical base that the Pallet Function's logical structure becomes univocal and singular-meaning is the law of the Providence of Existence>

As explained above, the logical structure of Pallet Function is a program representation composed of a series of codes so as to make the Reduction of the roles of the Providence of Existence such as Convergent Rule, Contingent Rule, Breakup, Regulation and Coupling, into the computer space, and a theoretical base of even up to 1 statement follows the Providence of Existence, thereby not allowing an entry of a product of personal ideas at all.

4.4.5. Action Vectors

<Aims of the present invention to be claimed by Action Vectors>

The Action Vector was invented as a logical structure to assist in fulfilling necessary and sufficient conditions of the means for inevitably eliminating uncertainty so as to determine software as univocal by using Homogeneity Map and Tense Control Vector.

<The meaning of 'the Action Vector satisfies Homogeneity Map and Tense Control Vector'>

The following points were already explained: This invention goes back up to the domain of the depths of consciousness that is thought to be situated in the root of giving a meaning to the means of recognizing a certain existence phenomenon as the one different from the other different existence phenomenon, and holds that, in the 'Consciousness meaning-space', the semantic quality is embodied irreversibly and becomes existence phenomenon in the Natural meaning-space, by taking, as the origin, what becomes of a meaning of the word in the 'Consciousness meaning-space', that is, a meaning structure to create semantic quality as univocal, then it is given a meaning (that is, 'recognized'), the process of which is the very scheme leading to the determination of software. This process was made into algorithm and is called 'Associative Equation', which is a theoretical expression of the present invention.

This Associative Equation is originally invisible to humans who belong to Natural meaning-space 701, in that it takes, as its independent variable, the Deuteronomy order i of Equivalent Logical Atom 1307 concerned with Consciousness Unit-Link 1309 in Consciousness meaning-space 703 which is a theoretical space and the semantic space diameter ri of the Consciousness Unit-Link 1309. Accordingly, it is impossible to directly specify the independent variable of Consciousness meaning-space 703 on this equation, and it had to be treated as abstract variable.

Thereupon, it is necessary to grasp semantic quality of Consciousness meaning-space 703 with independent variable that can be specified in Natural meaning-space 701 by realizing the correspondence of Consciousness meaning-space 703 and Natural meaning-space 701 by using an artificially designed spatial simulation. The function obtained in this manner is the 'Scenario Function' that can be indicated by the following expression. That is,

$$T0 = \Phi 0(+ \{\Phi p\{\quad\quad , L2(k, i) , P2(j)\} \}k$$

$$+ \Phi p \{ Y3(k, i) , L3(k, i) , P3(j), T1(f)\}$$

$$+ \{\Phi p \{Y4(k, i) , L4(k, i) , P4(j)\}\} k)$$

At the stage of this Scenario Function, however, it is still nothing but that it can grasp a set for giving a meaning that determines a relation between software requirement and a series of codes as univocal without involving arbitrariness. By going back to the root of an action of giving a meaning, i.e., a means of recognizing a certain existence phenomenon as different from the other existence phenomena, the present invention has realized algorithm of the process in which the univocal semantic quality of the word existent in a theoretical space thought to be latent in its origin, that is, Consciousness meaning-space 703, appears irreversibly into Natural meaning-space 701 and becomes existence phenomenon by human recognition.

This existence phenomenon as Natural Unit-Link is an existence of semantic quality before becoming existence with a mass all through the process reaching this point, i.e., Equivalent Unit-Link 1419. In reality, however, it is necessary to actualize the semantic quality as a data code into the data field belonging to media such as Screen, Printouts, existence with a mass, which consists of information processing system, and make it recognized by humans, thereby giving a meaning. For this, it is necessary to Reduce the process into the computer space.

Upon the Reduction into this computer space, and in the space is existence with a mass, and on the other hand, in the semantic quality, an object which shall be Reduced, is not an existence with a mass, it is necessary to actualize it by converting the object to-be-Reduced into an existence with a mass.

This conversion takes a premise of the followings:

- A meaning structure of every word is a program process logic composed of a series of codes.
- Semantic quality of every word is a data code created in the data field.
- The data field is memory's data field and media's data field, identified by the Word Identifier. By this conversion, the following new elements which did not exist in the aforementioned Scenario Function are derived, thereby a logical structure to handle them is needed.

(1) Semantic quality concerned with Consciousness Unit-Link which materializes in Consciousness meaning-space can be identified by the Deuteronomy order of the Equivalent Logical Atom. And, it is Reduced to the main memory. But, data code on the main memory cannot be recognized by humans, so it is necessary to make it visually recognizable by embodying it onto media such as Screen, Printouts, and File. When embodying semantic quality into the data field on such a media, a new logical structure is necessitated, which complements a logical structure of the Reduced Homogeneity Vector corresponding to Consciousness Unit-Link. That is, a logical structure of action which implements a transfer between media's data code and memory's data code is required.

This is called 'Command Action Vector'.

(2) Regulation in the Providence of Existence creates new Unit-Links with the number of continued product of Logical Atoms consisting of Event Unit-Link 1417. The Unit-Link is Equivalent Unit-Link 1419. The Equivalent Logical Atom concerned with the Equivalent Unit-Link 1419 inherits the Logical Atom concerned with Event Unit-Link 1417. The number of the Logical Atom comprising of Event Unit-Link 1417, however, cannot be specified in reality, because the Event meaning-space 707 is a space invisible from Natural meaning-space 701. Therefore, upon Reducing, it is necessary to derive a logical structure that handles the regulating condition to create the same number of Unit-Links as that number and the involution of that number.

This is called 'Work Requirement Action Vector'.

(3) Through Regulation from Event Unit-Link 1417, new Equivalent Unit-Links with the number of an involution of the number of Logical Atoms consisting of Event Unit-Link 1417 are created as Equivalent Unit-Link 1419, and they target to become any existence phenomena. In this instance, a part of the existence phenomena is grasped as targeting limited to information processing system. This is a software determinism of the present invention. However, it cannot be specified because the Event meaning-space 707 is a space invisible from Natural meaning-space 701. Also, it cannot be specified which regulated part targets information system. In reality, therefore, it is necessary to make a logical structure already derived to handle the routing for targeting information system by the Regulation.

This is called 'Routing Action Vector'.

(4) In the Providence of Existence, there happens to occur the disintegration of Unit-Link which is caused by the Deuteronomy of new Logical Atoms. Semantic quality also happens to be disintegrated. On the other hand, the Reduction of semantic quality is based in the data field on the memory, so it is necessary to make a logical structure already derived to handle this disintegrating action.

This action implements the initialization of the data field on the memory and the setting of the condition of creating Unit-Link and it is called 'Structural Adjustment Action Vector'.

Upon such Reduction, the aforementioned 'Scenario Function' is scrutinized based on the derived logical structure, and it is corrected as follows.

$$T0 = \Phi0\ (+ \{\Phi p\{\qquad , L2(k, i)\ , P2(j)\}\ \}k$$

$$+ \Phi p\ \{ Y3(k, i)\ , L3(k, i)\ , P3(j), T1(f)\}$$

$$+ \{\Phi p\ \{Y4(k, i)\ , L4(k, i)\ , P4(j)\}\}\ k)$$

Hereupon, T0 is Scenario Function which takes the Base Definitive as medium of Screen that is identified by Definitive Identifier k. Also, T1(f) is Scenario Function which takes the Base Definitive as medium of File that is identified by Definitive Identifier f. In addition, P3(j) and P4(j) are Action Vectors corresponding to operator f.

The complement of Scenario Function by Action Vectors satisfies the Providence of Existence, therefore it may as well be said that the Action Vector satisfies the establishment of Homogeneity Map and Tense Control Vector.

<Various points of Action Vector Logical Structure>

Fig. 60 is a flowchart for explaining the logical structure of Action Vector identified by the operator j.

The actual unit of Action Vector Pn(j)6001 is a unit of operator j that is identified as univocal. In the forefront 'Execute' judgment box (step 6003) of the Action Vector, conditions to execute individual actions are checked. In case of a Tense Control Vector, the check in the forefront 'Empty' judgment box is the verification of fixed conditions, for example, whether 'Data code exists' or not, or 'A state of Self = Self exists' or not, or 'Being mixed' or not.

On the other hand, in case of an Action Vector, because they are logical structures derived for handling various phenomena only concerned with information processing system as existence phenomenon, the check of executing conditions is for user's requirement as its main subject. For example, one of the Command Action Vectors, File Open Action Vector, becomes a check of executing condition whether 'File Opened' or not.

For example, in the 'Work Requirement Action Vector', it becomes a check of 'Self = Self' because it is necessary to unconditionally execute a process whether the contents of data code created in Tense Control Vector is 'within the prescribed range' or not.

Also, for example, in the 'Routing Action Vector', whether the executed result of 'Work Requirement Action Vector' was accepted or not becomes the executing condition of the check.

Also, for example, in 'Structural Adjustment Action Vector', whether 'WRITE to target File Ended' or not becomes the executing condition of the check.

In the 'Execute' judgment box (step 6003), which implements a check of executing condition, it terminates the relevant Action Vector with no process when the condition isn't for execution (step 6004). Because of this, the relevant Action Vector becomes identifiable primarily as an action vector implementing the execute process as the univocal thing.

In the 'Execute' judgment box (step 6003), which implements a check of executing condition, it executes 'Execute Process' (step 6005) of the relevant Action Vector, when the condition is for execution. For example, one of the Command Action Vectors, File Open Action Vector, executes 'File Open Directive Issuance'. Also, for example, the 'Work Requirement Action Vector', it becomes a process to check whether the contents of data code created in Tense Control Vector is 'within the prescribed range' or not.

Also, for example, with the 'Routing Action Vector', the 'Next-activating Pallet Identifier Setting' is executed. Also, for example, with the Structural Adjustment Action Vector, the 'Initialize Data Field concerned with Word belonging to object File' is executed. Further to mention, also in this process, the univocal execution process is to be realized with no need of classification of cases. Because of this, the relevant Action Vector becomes univocally identifiable as an Action Vector for the univocal execution process.

Following the 'Execute Process' (step 6005), the execution process is checked for accepted or not by 'Acceptance' (step 6007). In this check too, user's requirement becomes its main subject. For example, one of the Command Action Vectors, File Open Action Vector, becomes a check of 'Acceptance' of whether 'return information of Open Direction is 'normal' or not'. Also for example, in the 'Work Requirement Action Vector', it becomes a check of 'Acceptance' (step 6007) of 'Flag Set Done' indicating the contents of data code created in Tense Control Vector is within the prescribed range or not.

Further, in the Routing Action Vector, it becomes a check of 'Acceptance' (step 6007) of 'Flag Set Done for determination already set' or not. Also for example, in the Structural Adjustment Action Vector, it becomes a check of 'Acceptance' (step 6007) of 'Flag Set Done for initialization of data field Done' or not.

When the 'Acceptance' (step 6007) is valid, 'Acceptance Process' (step 6009) of execution process is implemented. For example, in case of one of the Command Action Vectors, which is File Open Action Vector, it is permitted not to perform 'Acceptance Process' (step 6007) if not required.

In case of the refusal of 'Acceptance' (step 6007), the setting of a refusal flag of words concerned with work requirement and the setting of a refusal flag of relevant Action Vector are implemented by 'Refusal Process' (step 6017).

4.4.6 Various points of Synchronization Data Structure

According to the present invention, software (its 'natural-language requirement and program composed of a series of codes') is also existence phenomenon, and this existence phenomenon is an object in which semantic quality concerned with Consciousness Unit-Link latent in a theoretical space called Consciousness meaning-space 703 is embodied through the action of the Providence of Existence and recognized by humans.

Assuming to Reduce the Providence of Existence into the computer space just as it is, which rules the embodiment of semantic quality, and if a program composed of a series of codes is created and operated, it shall satisfy requirements enabling the output of the 'this-and-that information' via media with a form possessing a nature of recognizing information directly and visually such as Screen and File. That is, as a result, it shall mean software (the relation between its 'natural-language requirement and program composed of a series of codes') can be determined as univocal, that is, software development shall be completed.

Now, assuming to Reduce the Providence of Existence into the computer space just as it is, which rules the embodiment of semantic quality, the base of programs to be created, which are composed of a series of codes, are the following:

- Homogeneity Vector which Definite Unit-Link 1413 mounts on W02 Pallet
- Homogeneity Vector which Event Unit-Link 1417 mounts on W03 Pallet
- Homogeneity Vector which Equivalent Unit-Link 1419 mounts on W03 Pallet.

In this instance, semantic quality assumed by Unit-Link, is a data code that is created in the data field on the main memory taking Word Identifier as its address. Further, a logical structure corresponding to the condition of Unit-Link and its materialization is a process logic identified by Word Identifier in the present invention.

Fig. 61 is a conceptual block diagram for explaining that the essence of program is composed of data field, process logic and data code, when conceiving the Providence of Existence as a theoretical base.

That is, the present invention discovered that the essence of program composed of a series of codes is, as shown in Fig. 61, a concept composed of elements such as data field, process logic and data code, if viewed taking the Providence of Existence as a theoretical base.

That is, in Fig. 61, both of Consciousness Unit-Link materialized in Consciousness meaning-space and semantic quality induced to Consciousness Unit-Link can be identified by the Deuteronomy order of the Equivalent Logical Atom concerned with the Consciousness Unit-Link. Their Reducing destination is the main memory. In the state of power supply OFF, however, the already-existing semantic quality will disappear.

In the Providence of Existence, the concept is that the Logical Atom is the univocal and exists eternally without disappearance, and the disappearance of semantic quality concerned with the Logical Atom, therefore, betrays the axiom of the Providence of Existence. For this, in information processing system, the countermeasure of storing the semantic quality, which will exist in the main memory, into file on the File of magnetic recording medium is normally adopted.

In other words, the logic of File Reference action which returns to the main memory from the File of this magnetic recording medium, the logic of File Entry which stores the synchronized data code, and the logic of File Update action will be necessitated. Such data records composed of data fields on File are called 'Data Structure'.

In the traditional methods, which do not include except this invention, the majority are positioning data base design as the key point leading to the success of software development. In data base design, data items are investigated at first, which belong to the target area of the software, and as a result of the investigation of synonymy of the meaning of data items, levels of frequency of their usage, etc., data items are to be determined so as to place them into data record by 'common use' and 'regulation'. As already mentioned in the present invention, however, the recognition of the synonymy of the meaning of data item terms as well as levels of frequency of their usage must be solved by personal category. That is, a correct-solution data structure cannot be determined.

On the other hand, as many number of Consciousness Unit-Links as possible in the Providence of Existence of the present invention are created all at once based on Divergent Dense Set 1301 composed of all Conscious Logical Atoms, and each of the Consciousness Unit-Links created is univocal, and independent and uniform. In the Reduction world of the Providence of Existence, the semantic quality induced to the Consciousness Unit-Link corresponds to data code created in the data field of the main memory and data record as well.

Accordingly, a concept of 'common use' and 'regulation' cited by the traditional methods, which is neither univocal nor independent, cannot exist at all in the Providence of Existence.

Therefore, in principle, a concept of data record and data structure is not necessary. For this reason, the W03 Pallet bundles data field and Tense Control Vector concerned with all words existing in the system, into the main memory.

In case of the data field on File of magnetic recording medium, however, there are inevitable physical limits of capacity, thus all the data fields cannot be placed onto 1 (one) record. Herein, a concept of data structure is necessitated. The way of the existence of the data structure is called 'Synchronization Data Structure' by the present invention.

Fig. 62 is a conceptual diagram for explaining that for the data structure, there are three kinds, namely, $\alpha$-type, $\beta$-type and $\gamma$-type. As shown by the same Fig., in the Reduction world of the Providence of Existence in the computer space, the meaning that data code is not existent in the data field identified by Word Identifier i belonging to the medium of Screen 6201 is that semantic quality of the Consciousness Unit-Link taking Logical Atom with the Deuteronomy order $\beta$ as its Equivalent Logical Atom has not yet materialized and is waiting to be embodied.

As its semantic quality, data code recorded in the data field which is identified by Word Identifier $\beta$ belonging to File 6203 is created by Command Action Vector 6207 and Homogeneity Vector 6209 mounted on W03 Pallet as data code in the data field 6211 on the main memory which is identified by Word Identifier $\beta$. Through W04 Pallet 6201's Tense Control Vector 6215 and Pallet Chain Function's Send function 6217, it shall be embodied as data code into the data field 6219 identified by Word Identifier β belonging to a medium of Screen 6201.

On the other hand, the meaning that data code is existent in the data field 6221 identified by Word Identifier α belonging to the medium of Screen 6201 is that semantic quality of the Consciousness Unit-Link taking Logical Atom with the Deuteronomy order α as its Equivalent Logical Atom has been materialized through humans, and it was synchronized as data code into the data field on the main memory which is identified by Word Identifier α by Homogeneity Vector 6225 mounted on W02 Pallet 6223 and Duplication Vector 6229 mounted on W03 Pallet 6227, additionally it is recorded by Command Action Vector as data code into the data field 6231 identified by Word Identifier α belonging to File 6203.

Further to add, data code exists in the data field 6233 identified by Word Identifier γ belonging to a medium of Screen 6201 with which data code is calculated by the operation of $\gamma = \gamma + \alpha$, it means that semantic quality of the Consciousness Unit-Link taking Logical Atom with the Deuteronomy order γ as its Equivalent Logical Atom was once embodied in the data field 6233 identified by Word Identifier γ belonging to the medium of Screen 6201, and it was synchronized by Homogeneity Vector 6225 mounted on W02 Pallet 6223 and Duplication Vector 6230 mounted on W03 Pallet as data code into the data field on the main memory identified by Word Identifier γ.

Against the synchronized semantic quality, the operation of $\gamma = \gamma + \alpha$ is implemented by the Self Creation of Homogeneity Vector 6234 mounted on W03 Pallet 6227, and the calculated result is re-synchronized as anew data code into the data field on the main memory identified by Word Identifier γ. By Command Action Vector, it shall be changed and recorded as data record into the data field identified by Word Identifier γ belonging to File.

Accordingly, on File 6203 of magnetic recording medium, if the same data field as the one placed on the medium 6201 of Screen is placed as it is without communization or Regulation, it shall satisfy the Providence of Existence. Such a data structure is called 'Synchronization Data Structure'.

And, data field 6231 identified by Word Identifier α on File 6203 of magnetic recording medium is called α-type (Entry/Delete), data field 6205 identified by Word Identifier β is called β-type (Reference), and data field 6235 identified by Word Identifier γ is called γ-type (Change).

Data records in which words of such types command the majority are called α-type (Registration/Delete) logical record, β-type (Reference) logical record and γ-type (Modification) logical record, respectively. These correspond to files generally called as follows:

α-type (Registration/Delete) logical record: transaction data file;
β-type (Reference) logical record: master file;
γ-type (Modification) logical record: ledger file; and
α-type and γ-type unified logical record: data base (DB).

Additionally, upon determination of the Synchronization Data Structure, it is possible to classify into 'integrated logical record' 6301 and 'disintegrated logical record' 6303, as shown in Fig. 63, depending upon the quantity of words belonging to Send Screen and Receive Screen.

4.4.7 Software Development Methodology

In this invention, the clue to develop software is thought to start with the utterance of the requirement of humans who use information processing system and desire the output of the 'this-and-that information' to be made via media possessing the form of the nature of recognizing information directly and visually such as Screen and File. At this stage, the number of clearly specified words uttered as 'this-and-that information' is extremely small, and it is impossible that they are neatly coordinated. That is, the range of development target and its requirement contents are in the 'uncertain' state. In this invention, software development work starts from such a state.

At the first stage, against the cognitive media of the system development requirement desiring the output of the 'this-and-that information' to be made via media possessing the form of the nature of recognizing information directly and visually such as Screen, File, the identifiers of media such as Screen and Printouts that identify the cognitive media are defined as Definitive Identifiers.

At the second stage, the Homogeneity Map is created based on the Definitive Identifiers. During the creation of this Homogeneity Map, Direction Commands required to give a clue to the output of 'this-and-that information' and Operation Keys prepared on the medium of Screen are automatically determined based on the various points of the inscription rule of the principle theoretical base of the Homogeneity Map.

As a result of this automatically comes out the need to prepare 'this-and-that information' and media such as Screen and File, which intermediate such information so as to observe the various points of the inscription rule of the principle theoretical base of the Homogeneity Map. Therefore, such information and the media are listed up. As a result, by determining to add Definitive Identifiers which identify the listed-up media and by complementing the Homogeneity Map by those Definitive Identifiers, the development target and its contents, which was in the uncertain state initially, can be minimized.

At the third stage, Word Identifiers, Type Attributes, Input/Output Attributes and Action Operators are determined, which are to distinguish 'this-and-that information' initially clearly uttered, from 'this-and-that information' listed up during the creation of the Homogeneity Map, and they are put down in the word table which is prepared for every Pallet inscribed on the Homogeneity Map.

At the fourth stage, for every Word Identifier and Operator expressed on the word table, Tense Control Vector and Action Vector, which are to be mounted on W04 Pallet, W02 Pallet and W03 Pallet (inscribed in the Homogeneity Map), are created as program composed of a series of codes so as to observe the various points of logical structure of their theoretical-base principle. As a result of this creation of Tense Control Vector and Action Vector in observing their respective various points of the inscription rule of the principle theoretical base, the uncertainty that was minimized by the creation of the Homogeneity Map is eliminated at this stage.

At the fifth stage, Pallet Function, which binds the logic composed of a series of codes of the created Tense Control Vector and Action Vector, and the data fields those logic target to process, into three kinds of Pallet so as to observe the various points of logical structure of their theoretical-base principle, are created as program composed of a series of codes, for all the Pallets inscribed in the Homogeneity Map.

At the sixth stage, Pallet Chain Function, which establishes synchronization by Activate Control Functions of each Pallet and by Data Send/Receive Functions with the medium of Screen, is created as program composed of a series of codes as univocal one for the system.

At the seventh stage, the created Pallet Chain Function and Pallets are assembled or compiled, then mounted onto the execution environment. Also, each of media is mounted based on the information determined at the third stage so as to enable operation.

At the eighth stage, for every identifier unit as for Tense Control Vector, Action Vector, Pallet Function and Pallet Chain Function, checks on human errors are implemented as a unit test based on the various points of logical structure of the principle theoretical base possessed by them, respectively. To be noted, in this invention, because no personality is mixed at all in the determination of the relation between logical structures, so-called functional test to confirm functions is not necessary at all.

The unit test is implemented in order only to confirm no violations to be caused by human errors as to the various points of logical structure of the principle theoretical base mentioned above. The determination of the logical structure and the relation between logical structures cannot help being solved by personal ability in methods other than the one in the present invention, but in this invention, it is done only by means of observing the already-existing various points of logical structure of the principle theoretical base. So, the debugging work (cancellation of logical inconsistency), which becomes indispensable in the traditional methods, is not required at all.

At the ninth stage, software resources such as time required for process, memory capacity are adjusted with the environmental conditions.

Hereinafter, details of these steps are explained in accordance with attached diagrams.

Fig. 64, is a diagram to show the sequence of work steps of software development based on the present invention.

<Determination of Definitive Identifiers (step 6401)>

For example, taking software development of information processing system which assists distribution business as an example, it is supposed that there are, as software development requirement, such clearly indicated terms (terms used herein represent those enclosed in <>, and they are called 'words' in this invention) as 'Desiring to enable <business management> to enhance <customer's satisfaction> by <grasping> <every moment> the <procurement lead time> based on the <inventory> and <orders received> and <shipment> of <goods>'.

In this invention, a requirement expressed by these terms is also grasped as existence phenomenon. That is, for clear terms as well as the other unclear terms but necessary and sufficient to satisfy this requirement, the univocal semantic quality of all those terms is regarded, if those respective terms' identifier is needed as Word Identifier, as already existing latently in Consciousness meaning-space as significance of Consciousness Unit-Link concerned with the Equivalent Logical Atom possessing the Deuteronomy order equivalent to the Word Identifier. That univocal semantic quality is regarded as an existence phenomenon embodied by the Providence of Existence.

The software development cited by the present invention is the work to determine logical structures which induce, in accordance with various points the principle theoretical base of the present invention, clear terms contained in this requirement, the other terms which is unclear but necessary and sufficient to satisfy this requirement, and the univocal semantic quality of those terms.

Now, the meaning of the aforementioned requirement's terms '<grasping> <every moment>' must take the form of possessing attribute that can recognize information visually and directly, so it can never be a medium of File, but is limited to medium of Screen or Printouts. Accordingly, the software development requirement shall become to desire 'grasping' data code to be output as information of 'the <procurement lead time> based on the <inventory> and <orders received> and <shipment> of <goods)>' via medium of the Screen or Printouts.

The 'determination of Definitive Identifiers' means to determine the Definitive Identifier which identifies the Screen to output, for example, '<invenory> of <goods>'. Concretely speaking, for example, it is a work to give a name in natural language, 'Product-wise Inventory Status Grasping Screen' or 'GOOD_STOCD_SCREEN', thereby giving an identifier in codes of 'GDSTCDSCRN' as an abbreviation.

Additionally, it is a work to determine the Definitive Identifier which identifies the Screen to output the '<procurement lead time> from <orders received> to <shipment>. Concretely, for example, a name of 'Product-wise Procurement Lead Time Status Grasping Screen' or 'GOOD_LEADTIME' is given in natural language, thereby giving an identifier in codes of 'GDLDTMSCRN' as an abbreviation.

The Definitive Identifiers determined in this manner are kept in record as memorandum in writing of the 'Definitive Table' as shown in Fig. 65.

<Creation of Homogeneity Map (step 6403)>

The creation of Homogeneity Map is a work to put Scenario Function into a diagram based on the determined Definitive Identifiers as well as various points of the inscription rule of the principle theoretical base possessed by Homogeneity Map.

Fig. 66 is a Homogeneity Map of the Screen named, for example, 'Product-wise Inventory Status Grasping Screen' with Definitive Identifier 'GDSTCDSCRN' which was created from the information expressed clearly in the 'Definitive Table' prepared at the 'Determination of Definitive Identifiers' work by observing various points of the inscription rule of the principle theoretical base possessed by Homogeneity Map.

Firstly, the 'Menu' is inscribed in box in accordance with the inscription rule of Homogeneity Map (6601). Then, among Pallets concerned with Definitive Identifier 'GDSTCDSCRN', the 'GDSTCDSCRN's W04 Pallet' is inscribed as a forefront box according to the inscription rule of Homogeneity Map (6603), thereby establishing the connection with Menu 6601.

The meaning of diagram inscribed up to this stage is as follows: When the 'Menu item' of 'Product-wise Procurement Lead Time Status Grasping Screen' is selected in Menu 6601, Pallet Chain-Function, which performs the role of the connection 6605 between Menu 6601 and 'GDSTCDSCRN's W04 Pallet', operates and determines the Definitive Identifier of 'GDSTCDSCRN', a selected Menu item, as Send information, and activates W04 Pallet concerned with the Definitive Identifier, that is, 'GDSTCDSCRN's W04 Pallet' 6603.

Next, among Pallets concerned with the Definitive Identifier of 'GDSTCDSCRN', the 'GDSTCDSCRN's W02 Pallet' (6607) is inscribed as a box on the right of 'GDSTCDSCRN's W04 Pallet' 6603, thereby establishing the connection between 'GDSTCDSCRN's W04 Pallet' 6603 and 'GDSTCDSCRN's W02 Pallet' (6607).

The meaning of the diagram inscribed up to this stage is as follows: That is, Tense Control, which performs the role of the connection between 'GDSTCDSCRN's W04 Pallet' 6603 and 'GDSTCDSCRN's W02 Pallet' (6607), operates and sends the 'Product-wise Procurement Lead Time Status Grasping Information' edited in 'GDSTCDSCRN's W04 Pallet' 6603 (not illustrated herein) to the Screen, and the Send result becomes existence phenomenon.

The person who recognized the existence phenomenon implements input operation targeting synchronization with the origin of the existence phenomenon. Pallet Chain Function receives the Screen intervening the 'synchronization targeting information' and activates W02 Pallet concerned with the Definitive Identifier, that is, 'GDSTCDSCRN's W02 Pallet' (6607).

Hereupon, due to the scheme of a computer, it is an essential condition that a command of Operation Key (or Direction Command) must have been issued by means of pressing keyboard or clicking mouth, via screen, so that Pallet Chain Function may be able to Receive. Accordingly, it becomes necessary at this point to examine whether a clear term equivalent to this 'Command' exists or not in the software development requirement as 'Desiring to enable <business management> to enhance <customer's satisfaction> by <grasping> <every moment> the <procurement lead time> based on the <inventory> and <orders received> and <shipment> of <goods>', in view of observing the principle theoretical base.

In the examination, verbs in the expression clarifying the requirement are selected as terms corresponding to 'command'. As a result, for example, the term <grasp> exists as a term corresponding to 'command', so this term <grasp> is allocated to Operation Key (or Direction Command). Also, for example, in case clear terms corresponding to 'command' are not found in the requirement, it is necessary to ask the requirement presenter about the intention of requirement corresponding to 'command' and confirm it, in view of the kind and the nature of the principle of process logic such as 'α-type (Existence-type)', 'β-type (Reference-type)' and 'γ-type (Update-type)' and data field, thereby satisfying the principle theoretical base.

Terms corresponding to 'α-type (Existence-type)' herein are, for example, such terms as with a meaning of <Entry>, <Input>, and <Delete>. Also, terms corresponding to 'β-type (Reference-type)' herein are, for example, such terms as with a meaning of <Search>, <grasp>, <Print>. Also, terms corresponding to 'γ-type (Update-type)' herein are, for example, such terms as with a meaning of <Change> and <Update>.

Next, among Pallets concerned with Definitive Identifier 'GDSTCDSCRN', the W03 Pallet is inscribed in box (6611) on the right of 'GDSTCDSCRN's W02 Pallet' 6607 according to the inscription rule of Homogeneity Map, thereby establishing a connection (6613) of 'GDSTCDSCRN's W02 Pallet' (6607) with W03 Pallet 6611. Connections permitted herein are the connection 6613 with W03 Pallet 6611 and the connection 6615 with W04 Pallet 6603 concerned with Screen Identifier of non-Self Screen, which is called 'Continuous Chain.'

The meaning of a command <grasp> is that, by activating W03 Pallet 6611, synchronization shall be established in the computer space in which the Providence of Existence has been reduced, so the connection 6613 between "GDSTCDSCRN's W02 Pallet' (6607) and W03 Pallet 6611 shall satisfy various points of the inscription rule of the principle theoretical base as a connection corresponding to the command <grasp>.

Hereupon, there is a rule of Continuous Chain in various points of the inscription rule of the principle theoretical base, so it is examined whether terms with a meaning of command concerned with it exist in the expression clarifying the requirement or not. But, verbs with a meaning of Continuous Chain cannot be found in the expression clarifying the requirement, so the determination of Continuous Chain is tried by examining at various points of the inscription rule of the principle theoretical base.

Then, there are 'System Blockade' 5405 and 'In-WT Continue' 5409 judgment boxes as roles of Pallet Chain Function. The former 'System Blockade' is normally a command within a Menu, and the latter 'In-WT Continue' is Continuous Chain to the Menu. From this, as a conclusion, a command of 'Return to Menu' becomes necessary to satisfy various points of the inscription rule of the principle theoretical base.

As a result of this, 'GDSTCDSCRN's W02 Pallet' 6607 and Menu 6601 are connected (6615) to realize the command of 'Return to Menu', and with this inscription, various points of the inscription rule of the principle theoretical base shall be satisfied. At this point, the term 'Return to Menu' latent in the software development requirement was drawn out by the principle of the present invention.

The meaning of the diagram inscribed up to this point is as follows: Pallet Chain Function operates, which performs roles of the connection 6613 between 'GDSTCDSCRN's W02 Pallet' 6607 and W03 Pallet 6611, and W03 Pallet 6611 is activated so as to synchronize the synchronization-oriented information which passed Attribute Check in 'GDSTCDSCRN's W02 Pallet' 6607, and eventually synchronization is implemented in W03 Pallet.

This synchronizing action meant by the Providence of Existence is as follows: For example, among the synchronization-oriented information which was input via Screen of 'Product-wise Inventory Status Grasping Information', if data code does not exist in the data fields indicated by identifiers that identify terms of <Product> and <Inventory Status> which were prepared on the medium of the Screen, that is, as for words with which semantic quality of Consciousness Unit-Link has not yet been embodied, the semantic quality shall be induced as a data code into the data field identified by the Word Identifier on the main memory of W03 Pallet 6611. According to the various points of the principle theoretical base to satisfy the Providence of Existence, the data code induced herein shall be either being substituted by the data code in the data field prepared on the medium which is identified by another Definitive Identifier while possessing the same Word Identifier, or being obtained through the operation by the data code in the data field which is identified by the other plural Word Identifiers.

Also, among the synchronization-oriented information which was input via Screen of 'Product-wise Inventory Status Grasping Information', if data code exists in the data fields indicated by identifiers which identify terms of <goods> and terms of <inventory status> prepared on the medium of the Screen, that is, as to words with which semantic quality of Consciousness Unit-Link is already embodied, the data code on the Screen shall be synchronized with the data field identified by the Word Identifier on the main memory of W03 Pallet 6611 by the Duplication Vector identified by the Word Identifier which is mounted on W03 Pallet 6611.

When recording on the medium of File in order not to lose data code in the data field identified by the Word Identifier on the main memory upon the power shutdown of information processing system, it is necessary to implement Registration or Reference by the Action Vector mounted on W03 Pallet 6611. Accordingly, at this point, it becomes necessary to implement input or output attribute check of the data field on the medium of Screen which is indicated by the identifier that identifies by the terms of <goods> and <inventory status> existent in the software development requirement of the '<grasping> <every moment> the <inventory status> of the <goods>.

As a result, for example, the data field on the Screen identified by the Word Identifier of <Goods> is determined as Input Attribute, and for example, the data field on the Screen identified by the Word Identifier of <inventory status> is determined as Output Attribute.

As a result, it becomes necessary to satisfy the Providence of Existence either by placing the semantic quality identified by the Word Identifier of <goods> as already existent in the data field identified by the Word Identifier of <Goods> on the File which is identified by the identifier of 'GDSTCDFILE' with the name of 'Inventory Management File,' or by placing new semantic quality as existent by the extension of the command of <grasp> issued from the 'Product-wise Inventory Status Grasping Information' Screen.

Also, for example, it becomes necessary to satisfy the Providence of Existence by placing the semantic quality identified by the Word Identifier of <inventory information> in the data record, as already existent, which is composed of the data field identified by the identifier of <Goods> on the main memory which is identified by the identifier of 'GDSTCDFILE' with the name of 'Inventory Management File' and the data field identified by the Word Identifier of <inventory information>.

As a result, so as to fulfill the requirement not clear at the initial stage of software development, a <media of File identified by the identifier 'GDSTCDFILE' with the name of 'Inventory Management File'> becomes necessary, and this means that the term to identify it has been drawn out by the principle of the present invention. Also, because such a medium of File becomes necessary to satisfy the requirement, it is mandatory to create a new Screen (for example, 'Product Purchase Information Registration' and 'Product Shipment Information Registration', etc.) and a Homogeneity Map concerned with the Screen. By doing it, the uncertain state shall be minimized gradually.

Next, hereupon, connections permitted by the various points of the inscription rule of the principle theoretical base of the Homogeneity Map are 'Restart Chain,' 'Duplicate Chain' and 'Multiplex Chain.'

The 'Restart Chain' 6619 is to operate W04 Pallet 6603 corresponding to the self Screen, the 'Duplicate Chain' 6621 is to operate W04 Pallet 6617 corresponding to a new Screen except for the self, and the 'Multiplex Chain' 6625 is to W04 Pallet corresponding to non-self Screen that has already operated.

In other words, 'Restart Chain' 6619 is to again operate W04 Pallet 6603 concerned with the self Screen, and it is a case in which to embody semantic quality induced in W03 Pallet 6611 via self Screen. In this instance, W04 Pallet concerned with the self Screen was already inscribed in box 6603 of 'GDSTCDSCRN's W04 Pallet', so it is enough to connect (6619) between the 'GDSTCDSCRN's W04 Pallet' 6603 and W03 Pallet 6611.

Also, 'Duplicate Chain' 6621 is such a case as to perform synchronization by receiving support of the word belonging to a new non-self Screen, that is, for example, to receive support of the Screen identified by the identifier of <GDLISTSCRN> with the name of <Product Lookup Screen>. In such an instance, 'GDLISTSCRN's W04 Pallet' is inscribed in the box (6617) which branched from W03 Pallet 6617 and is connected with W03 Pallet 6611 (6621).

As a result, at this point, it is meant that, in accordance with the principle of the present invention, the following terms have been drawn out, which were not clear in the software development requirement but necessary to satisfy the requirement, including the medium of Screen identified by the identifier 'GDLISTSCRN' with the name of 'Product Lookup Screen' and the medium of File identified by the identifier 'GDLISTFILE' with the name of'Product Lookup File'.

Hereupon, since such a media of File are necessary to satisfy the requirement, it becomes mandatory to create a new Screen (for example, 'Product Master', etc.) and a Homogeneity Map concerned with the Screen. By so doing, the uncertain state shall be minimized gradually.

Also, 'Multiplex Chain' 6625 is to operate 'W04 Pallet' corresponding to the non-self Screen that has already operated, that is, for example it is a case in which to connect (6625) between the forefront 'GDSTCDSCRN's W04 Pallet' 6603 and W03 Pallet 6623.

Fig. 67 is a Definitive Lookup Table with addition of Definitive Identifiers which were newly drawn out as a result of the work for creating the Homogeneity Map through observing the various points of the Homogeneity Map inscription rule of the principle theoretical base.

<Creation of Word Table (step 6404)>

The 'creation of Word Table' is a work to determine the following based on the created Homogeneity Map and inscribe them in the Word Table. As to Tense Control Vector and Action Vector which shall be mounted on each of Pallets inscribed in the Homogeneity Map, Word Identifier 6801 (which identifies it) and Type Attribute 6803, the number of figures 6805 and Input/Output Attribute 6807 of data field identified by the Word Identifier are determined and inscribed, whereas as to Action Vector, Action Operator 6801 (which identifies it) is determined and inscribed.

Fig 68 is a diagram to show 'W04 Pallet Word Table of Product-wise inventory Status Grasping Screen GDSTCDSCRN', which was created from both of the information that was put down clearly in the Homogeneity Map just after it was created and various kinds of information necessary to fulfill the requirement that was drawn out and listed during the course of creating Homogeneity Map.

The <Goods> of item number 1 in this diagram is a term uttered as the requirement, and it was scrutinized at the stage of creating Homogeneity Map, and represents that it was dissolved into <Product Code> of item number 1_1 and into <Product Name> of item number 1_2.

The <Inventory Information> of item number 2 is a term uttered as the requirement, and it was scrutinized at the stage of creating Homogeneity Map, and represents that it was dissolved into <Reasonable Inventory> of item number 2_1 and into <Current Inventory> of item number 2_2.

The <Direction> of item number 3 represents the nature of the term <grasp> uttered as the requirement, and it means that it was scrutinized at the stage of creating the Homogeneity Map and dissolved into <grasp> of item number 3_1 and into <Return to Menu> of item number 3_2.

The <Message> of item number 4 was not uttered as the requirement but it was scrutinized, at the stage of creating Homogeneity Map, by the various points of the inscription rule of the principle theoretical base possessed by Homogeneity Map (specifically, the Refusal Code Set of the Homogeneity Vector mounted on W04 Pallet), and it was dissolved into <Message Code> of item number 4_1 and into <Message Text> of item number 4_2.

The <Message-related> of item number 5 was not uttered as the requirement, too but it was scrutinized, at the stage of creating Homogeneity Map, by the various points of the inscription rule of the principle theoretical base possessed by Homogeneity Map, and it was dissolved into <Message File Open> of item number 5_1, <File Word Message Code Determine> of item number 5_2, <Message File READ> of item number 5_3, and <Message Text Edit> of item number 5_4.

Also, the <Route Setting Action Vector> of item number 5_5 is an Action Vector corresponding to the connection with W02 Pallet concerned with the self Screen that was automatically drawn out from the various points of the inscription rule of the principle theoretical base possessed by Homogeneity Map.

Also, Action Vector of the structural adjustment, that is, <File-related Refusal Flag Reset> of item number 6-1 represents it was scrutinized by the various points of the Action vector mounted on W04.

Additionally, Action Vector of the structural adjustment, that is, <File-related Data Field Empty> of item number 6-2 is an Action Vector to empty the data field of the Self Creation of the Homogeneity Vector concerned with File-related words mounted on W03 Pallet.

Fig. 69 is a diagram to show 'Product Lookup Table Screen GDLISTCRN's W04 Pallet Word Table' which was created from the information which was clearly expressed on the Homogeneity Map just after it was created and the various kinds of information needed to satisfy the requirement drawn out through creating Homogeneity Map

Fig. 70 is 'Product-wise Inventory Status Grasping Screen GDSTCDSCRN's W02 Pallet Word Table' which was created from the information which was clearly expressed on the Homogeneity Map just after it was created and the various kinds of information needed to satisfy the requirement drawn out through creating Homogeneity Map. Contents inscribed in the 'W02 Pallet's Word Table' is those of 'W04 Pallet's Word Table' with Action Vectors excluded.

Fig. 71 is 'Product Lookup Screen GDLISTSCRN's W02 Pallet Word Table' which was created from the information which was clearly expressed on the Homogeneity Map just after it was created and the various kinds of information needed to satisfy the requirement drawn out through creating Homogeneity Map.

Fig. 72 and Fig. 73 are 'W03 Pallet Word Table' which was created from the information which was clearly expressed on the Homogeneity Map just after it was created and the various kinds of information needed to satisfy the requirement drawn out through creating Homogeneity Map.

Contents inscribed in the W03 Pallet's Word Table are, in addition to all the contents of all 'W02 Pallet's Word Table', all words and Command Action Vectors belonging to all Files, as well as Work Requirement Action Vector, Routing Action Vector and 'Structural Adjustment Action Vector' which were scrutinized by the various points of the Action vector mounted on W03 Pallet.

Further to add, the 'Work Requirement Action Vector' of the <Reasonable Inventory Alert> of item number 12_1 was added to satisfy the work requirement desiring to calculate the Reasonable Inventory by the following formula:

<Reasonable Inventory> = <Current Inventory> -< Defect quantity>

Also, the 'Routing Action Vector' of the <Restart Chain 1> of item number 13-1 is an Action Vector to rule the route setting to W04 Pallet concerned with the Product-wise Inventory Status Grasping Screen, and the 'Route Setting Action Vector' of the <Restart Chain 2> of item number 13-2 is an Action Vector to rule the route setting to W04 Pallet concerned with the Product Lookup Screen.

Also, the 'Routing Action Vector' of the <Duplicate Chain 1> of item number 13-3 is an Action Vector to rule the route setting from the Product-wise Inventory Status Grasping Screen to the W04 Pallet concerned with The Product Lookup Screen, and the 'Routing Action Vector' of the <Multiplex Chain 1> of item number 13-4 is an Action Vector to rule the route setting from the Product Lookup Screen to W04 Pallet concerned with the Product-wise Inventory Status Grasping Screen.

Further, the 'Structural Adjustment Action Vector' of the <Action Vector Execute Done Flag Reset> of item number 14-1 is an Action Vector to 'initialize' so as to manage the ending of execution of various Action Vectors mounted on W03 Pallet.

<Creation of Tense Control Vector and Action Vector (step 6407)>

The 'creation of Tense Control Vector and Action vector' is a work for creating, in accordance with Word Table of every created Pallet and for each identifier, Tense Control Vectors (Duplication Vector and Homogeneity Vector) identified by the identifier and Action Vectors as a program composed of a series of codes, by observing the various points of the logical structure of the principle theoretical base possessed by them.

«W02 Homogeneity Vector»

Fig. 74 is a diagram for explaining a function which determines a program composed of a series of codes of W02 Homogeneity Vector concerned with the word of Word Identifier i which belongs to Definitive Identifier k.

Homogeneity Vectors to be mounted on W02 Pallet are created as program composed of a series of codes for every word clarified in W02 Pallet Word Table in accordance with the logical structure shown in Fig. 44 by observing the various points of the principle theoretical base possessed of the logical structure.

First, the 'Private Sub L2 @k@ @i@()' (7401) is a functional part to determine Homogeneity Vector of Program Identifier L2(k, i) by programming language 'Visual Basic', and if Definitive Identifier k and Word Identifier i are substituted into Independent Variable @k@ @i@, the identifier of the program composed of a series of codes can be determined.

For example, in case of the W02 Pallet Word Table with its Definitive Identifier GDSTCDSCRN and its name <Product-wise Inventory Status Grasping Screen>, a Program Identifier of the Homogeneity Vector mounted on W02 Pallet of the word with its Word Identifier <GOOD_CD> and its name <Product Code> (clarified in W02 Pallet Word Table) can be determined univocally as <Private Sub L2_GDSTCDSCRN_GOOD_CD()> when k = GDSTCDSCRN and i = GOOD_CD are substituted into the '@k@ @i@, of 'Private Sub L2 @k@ @i@()' (7401)'.

Also, for example, in case of the W02 Pallet Word Table with its Definitive Identifier GDSTCDSCRN and its name <Product-wise Inventory Status Grasping Screen>, the word with its name <Reasonable Inventory> and its Word Identifier <STCD_LV> (clarified W02 Pallet Word Table) can be similarly determined univocally as <Private Sub L2_GDSTCDSCRN_STCD_LV()>. What is meant by these codes is as follows: They are the programs (Private Sub) of 'Homogeneity Vector (L2) mounted on W02 Pallet' against the Definitive Identifier which identifies the Screen to which individual Word Identifiers and their words are belonging, and they were determined univocally by taking Definitive Identifier k and Word Identifier i as independent variables.

The 'If W02.@k@.@i@ = "" Then Exit Sub End If' (7403) is a functional part to determine the check logic of the 'Empty' (step 4406) by programming language 'Visual Basic', and if Definitive Identifier k and Word Identifier i are substituted into Independent Variable @k@ @i@, a program composed of a series of codes can be determined.

For example, a check logic of the word 'Empty' of the word <GOOD_CD> with its name <Product Code> and Its Word Identifier <GOOD_CD>, which is clarified in the W02 Pallet Word Table with its name <Product-wise Inventory Status Grasping Screen> and its Definitive Identifier <GDSTCDSCRN>, can be determined univocally as <If W02.GDSTCDSCRN.GOOD_CD = "" Then Then Exit Sub End If> by substituting k = GDSTCDSCRN and i = GOOD_CD into 'If W02.@k@.@i@ = "" Then Exit Sub End If' (7403). Also, for example, in the < Product-wise Inventory Status Grasping Screen>, in case of a word with its Definitive Identifier <GDSTCDSCRN>, its name <Reasonable Inventory> and its Word Identifier <STCD_LV>, it is determined univocally as <If W02.GDSTCDSCRN.STCD_LV = " " Then Then Exit Sub End If>.

What is meant by this is as follows: Data code doesn't exist in the data field on W02 pallet which takes individual self Word Identifiers as addresses, that is, it can be revealed to the Consciousness Unit-Link in which "the Kuh" is established. Further, it means that the inducement of semantic quality of the Consciousness Unit-Link in which 'the Kuh' is established is entrusted to the Homogeneity Vector of W03 Pallet. Accordingly, when the 'Empty' check is accepted (IF W02.@k@.@i@ = "" Then), it is determined univocally as codes <Exit Sub> so as to end process of this Homogeneity Vector as it is.

Then, when the 'Empty' check is not accepted (4407), it means as follows: Data code exists in the data field which takes individual self Word Identifiers as addresses, that is, semantic quality of the Consciousness Unit-Link in which 'the Kuh' is established has been already embodied via humans and it means that the semantic quality shall be synchronized with 'W03 Pallet' which is Consciousness meaning-space 703 reduced into the computer space. But, this action is an reversible action betraying the axiom of the Providence of Existence, so it is possible to FALSE. Therefore, the feasibility of synchronization must be necessarily examined.

This Examination is handled by the 'Attribute Check' process box (step 4407), and a function that determines a program composed of a serried of codes corresponding to this process is 'J = 0 If IsNumeric (W2.) @k@.@i@) Then J = 1 End If' (7405). That is, by substituting Definitive Identifier k and Word Identifier i into Independent Variable @k@.@i@, the program of the 'Attribute Check' process box (step 4407) can be determined in a programming language 'Visual Basic' which is a of a series of codes.

For example, a logic of the 'Attribute Check' of the word with its name <Product Code> and its Word Identifier <GOOD_CD> which is clarified in the 'W02 Pallet Word Table' with its name <Product-wise Inventory Status Grasping Screen> and its Definitive Identifier <GDSTCDSCRN> can be univocally determined as <J = 0 If IsAlphaNumeric (W02.GDSTCDSCRN.GOOD_CD) Then J = 1 End If> which is composed of a series of codes written in a programming language 'Visual Basic'.

Also, for example, in case of the word with its name <Reasonable Inventory> and its Word Identifier <STCD_LV> which is clarified in the 'W02 Pallet Word Table' with its name <Product-wise Inventory Status Grasping Screen> and its Definitive Identifier <GDSTCDSCRN> can be univocally determined as <J = 0 If IsAlphaNumeric (W02.GDSTCDSCRN.GOOD_LV) Then J = 1 End If>. Hereupon, <IsAlphaNumeric (W02.GDSTCDSCRN. GOOD_CD> means if Type Attribute on the data field of W02 Pallet which takes the Word Identifier as its address matches or not to the Type Attribute of the <characters> regulated in the Word Table, and <IsAlphaNumeric (W02.GDSTCDSCRN.GOOD_LV> means if Attribute on the data field of W02 Pallet which takes the Word Identifier as its address matches or not to the Attribute of the <numeric> regulated in the Word Table, and both of which shall have been determined only by the Word Table information.

When the 'Attribute Check' has been accepted, semantic quality of the Consciousness Unit-Link in which the 'Kuh' is established has already been embodied via humans, and it is synchronized with W03 Pallet which is Consciousness meaning-space 703 reduced into the computer space, so it is necessary to set the initially-Refusal state into the Acceptance state (4415). Also, in case of the Refusal of the 'Attribute Check', codes required therein can be made into as such to end the process of this Homogeneity Vector in the initial-Refusal state as it is.

A function to determine a corresponding program composed of a series of codes is 'If J <> Then Exit Sub End If 7407 and W02. @k@.@i@ Non = False' (7409). That is, by substituting Definitive Identifier k and Word Identifier i into Independent Variable @k@.@i@, the program of the 'Acceptance Check' process box (step 4411) and Refusal Flag Reset (step 4415) can be determined in a programming language 'Visual Basic' which is composed of a series of codes. For example, a logic of the 'Attribute Check' of the word with its name <Product> and its Word Identifier <GOOD_CD> which is clarified in the 'W02 Pallet Word Table' with its name <Product-wise Inventory Status Grasping Screen> and its Definitive Identifier <GDSTCDSCRN> can be univocally determined as <If J <> Then Exit Sub End If W02. GDSTCDSCRN. GOOD_CD_Non = False> with codes in a programming language 'Visual Basic'.

Also, for example, as to the word with its name <Reasonable Inventory> and its Word Identifier <STCD_LV>, it is univocally determined as <If J <> Then Exit Sub End If W02. GDSTCDSCRN. STCD_LV_Non = False>.

Further, for example, as to the word prepared on the Screen as Operation Key (or Direction Command) such terms as 'grasp', it is a word for realizing a newly caused synchronous action in the reduced environment so as to imitate the Providence of Existence into the computer space and it is not semantic quality itself.

Therefore, the logic for the 'Attribute Check' (step 4407) part of the word that is Operation Key (or Direction Command) is not an attribute check logic, but it must be a logic to set Unit-Link conditions concerned with synchronizing method, that is, Continuous Chain, Restart Chain, Duplicate Chain or Multiplex Chain.

The Unit-Link conditions are, for example, Next Send Screen Identifier (CTRL.NxtScnID), for example, Need or No-Need of Scenario Unit-Link Continue (CTRL.New_Continue). And, these conditions are inevitably determined from the information inscribed in the Homogeneity Map.

For example, the logic for the 'Attribute Check' (step 4407) part of the word with its word name <grasp> and its Word Identifier <PF1_Key> which is clarified in the W02 Pallet Word Table with its Definitive name <Product-wise Inventory Status Grasping Screen> and its Definitive Identifier <GDSTCDSCRN> becomes as follows based on the information inscribed in the Homogeneity Map of Fig. 66: <Next Activate Pallet Identifier = W03 Pallet Identifier (CTRL. NxtP1tID ="W03"), Next Send Screen Identifier = GDSTCDSCRN(CTRL.NxtScnID = "GDSTCDSCRN"), Need or No-Need of Scenario Function Continue - Need (CTRL.New_Continue = True)>.

Also, for example, because the word name clarified in the W02 Pallet Word Table with its Definitive name <Product-wise Inventory Status Grasping Screen> and its Definitive Identifier <GDSTCDSCRN> returns to the Menu, the logic for the 'Attribute Check' (step 4407) part of the word with its Word Identifier <PF3_Key> becomes as follows based on the information inscribed in the Homogeneity Map of Fig. 66: <Next Activate Pallet Identifier = W03 Pallet Identifier (CTRL.NxtP1lID = "W03"), Next Send Screen Identifier = GDSTCDSCRN (CTRL.NxtScnID = "MENUSCRN"), Need or No-Need of Scenario Unit-Link Continue = Need (CTRL.New_Continue = False)>.

As explained above, programs of the W02 Pallet's Homogeneity Vector composed of a series of codes, i.e., even 1 (one) statement, can be univocally determined as a functional solution, and as a result, the uncertainty is eliminated.

Also, the program of W02 Pallet's Homogeneity Vector which is composed of a series of codes only handles the object of the data field concerned with the self Word Identifier, and it only examines on the presence of data in the forefront 'Empty' judgment box, so it is an autonomous logic operating with conditions concerned with the self, and in that it is being autonomous it can be said to be an independent logic.

Also, additionally, it does no action against non-self and repetitive logic is not contained in the Homogeneity Vector, therefore the concerned Homogeneity Vector can be said to be a static logic.

Therefore, to determine the operational sequence of these Homogeneity Vectors, no conditions are necessarily considered.

<<W03 Duplication Vector>>

Fig. 75 is a diagram for explaining a function to determine Duplication Vector's program composed of a series of codes which are concerned with the word of Word Identifier i belonging to Definitive Identifier k.

Duplication Vectors mounted on W03 Pallet are created, for every word clarified in the W03 Pallet Word Table, as a program composed of a series of codes by observing the various points of the logical structure of the principle theoretical base in accordance with the logical structure shown in Fig. 44.

First, 'Private Sub Y3 @k@ @i@ ()'(7501) is a functional part to determine Program Identifier Y3(k,i) in a programming language 'Visual Basic', and by substituting Definitive Identifier k and Word Identifier i into Independent Variable @k@ @i@, an identifier of the program composed of a series of codes can be determined.

For example, a program identifier of the Duplication Vector mounted on W03 Pallet of the word with its name <Product Code> and its Word Identifier <GOOD_CD> which is clarified in the W03 Pallet Word Table with its name <Product-wise Inventory Status Grasping Screen> and its Definitive Identifier <GDSTCDSCRN> can be univocally determined as <Private Sub Y3_GDSTCDSCRN_GOOD_CD()> if coded into codes by using Visual Basic.

Also, for example, as to the word with its name <Reasonable Inventory> and its Word Identifier <STCD_LV>, it is univocally determined as <Private Sub Y3_GDSTCDSCRN_STCD_LV()>. The meaning of these codes is as follows: They are programs (Private Sub) which are 'Duplication Vector (Y3) mounted on W03 Pallet' against the Definitive Identifier that identifies individual Word Identifiers and the Screen to which those words belong, and they can be univocally determined by using Definitive Identifier k and Word Identifier i as Independent Variables.

'If W02. @k@.@i@ ="'" (7503) is a functional part to determine a logic to check the 'Empty' (step 4429) by 'Visual Basic' programming language, and by substituting Definitive Identifier k and Word Identifier i into Independent Variable @k@ @i@, the program composed of a series of codes can be determined.

For example, a program to execute a check logic for the 'Empty' (step 4427) of the word with its name <Product Code> and its Word Identifier <GOOD_CD> which is clarified in the W03 Pallet Word Table with its Definitive name <Product-wise Inventory Status Grasping Screen> and its Definitive Identifier <GDSTCDSCRN>, can be univocally determined as <If W02.GDSTCDSCRN.GOOD_CD = "" Then Goto Exit Sub> if coded into codes by Visual Basic.

Also, a program to execute a check logic for the 'Empty' (step 4427) of the word with its name <Reasonable Inventory> and its Word Identifier <STCD_LV> which is clarified in the W03 Pallet Word Table with its Definitive name <Product-wise Inventory Status Grasping Screen> and its Definitive Identifier <GDSTCDSCRN>, can be univocally determined as <If W02.GDSTCDSCRN.STCD_LV = " " Then Goto Exit Sub> if coded into codes by using Visual Basic.

These codes are a program to check if data code exists <= ""> in the data field (step 7501) <W02.GDSTCDSCRN.STCD_LV> of the address includes three kinds of identifiers: self Word Identifier (STCD_LV), Definitive Identifier which lets the word belong to (GDSTCDSCRN) and W02 Pallet's identifier (W02).

The meaning of these codes viewed from the Providence of Existence is as follows: If it is Definite Unit-Link revealed to Consciousness Unit-Link in which 'Kuh' is established, then semantic quality of the word which is equivalent Logical Atom concerned with the Definite Unit-Link, that is, the data code is induced by Event Unit-Link, therefore the process ends (step 4425) as it is without any execution.

On the other hand, 'W03. @k@.@i@ = W02. @k@.@i@' (7505) is a functional part to determine a logic of 'Duplication' in 'Visual Basic' programming language, and by substituting Definitive Identifier k and Word Identifier i into Independent Variable @k@ @i@, the program composed of a series of codes can be determined.

For example, a program to execute 'Duplication' (step 4429) of the word with its word name <Product Code> and its Word Identifier <GOOD_CD> which is clarified in the W03 Pallet Word Table with its Definitive name <Product-wise Inventory Status Grasping Screen> and its Definitive Identifier <GDSTCDSCRN> can be univocally determined as <W03.GDSTCDSCRN.GOOD_CD = W02. GDSTCDSCRN.GOOD_CD> if coded into codes by using Visual Basic. Also, for example, a program to execute 'Duplication' (step 4429) of the word with its word name <Reasonable Inventory> and its Word Identifier <STCD_LV> which is clarified in the W03 Pallet Word Table with its Definitive name <Product-wise Inventory Status Grasping Screen> and its Definitive Identifier <GDSTCDSCRN> can be univocally determined as <W03.GDSTCDSCRN.STCD_LV = W02. GDSTCDSCRN.STCD_LV> if coded into codes by using Visual Basic.

These codes are a program to substitute the data code of the data field <W02.GDSTCDSCRN.STCD_LV> of the address includeing three kinds of identifiers: self Word Identifier (STCD_LV), Definitive Identifier (GDSTCDSCRN) which lets the word belong to and W02 Pallet's identifier (W02), into the data field of the address including three kinds of identifiers: self Word Identifier (STCD_LV), Definitive Identifier (GDSTCDSCRN) which lets the word belong to and W03 Pallet's identifier (W03).

The meaning of these codes viewed from the Providence of Existence is as follows: Definite Unit-Link which can be synchronized with Consciousness Unit-Link in which the 'Kuh' is established, that is, semantic quality concerned with Consciousness Unit-Link in which the 'Kuh' is established, has already been embodied via humans, so in order to make the semantic quality concerned with the Consciousness Unit-Link in which the 'Kuh' is established existent also in the environment Reduced so as to imitate the Providence of Existence into the computer space, it Reduces data code <W02.GDSTCDSCRN.STCD_LV> into Consciousness meaning-space <W03.GDSTCDSCRN. STCD_LV> as semantic quality input via Screen word so as to synchronize with the Providence of Existence.

As explained above, programs of the 'W03 Pallet's Duplication Vector' (4423) composed of codes, i.e., even 1 (one) statement, can be univocally determined as a functional solution only based on Homogeneity Map and Word Table information, and as a result, the uncertainty is eliminated.

Also, the program of 'W03 Pallet's Duplication Vector' (4423) which is composed of codes only handles the object of the data field concerned with the self Word Identifier, and it only examines the presence of data in the forefront 'Empty' judgment box (step 4427), so it is an 'autonomous logic operating only with the self conditions', and in that it is 'being autonomous' it can be said to be an independent logic.

Also, additionally, since it does no action against non-self thus repetitive logic is not contained in the Duplication Vector, 'it does not affect changes against non-self' and 'there is no status change in itself', thus the concerned Duplication Vector can be said to be a static logic.

Therefore, to determine the operational sequence of these Duplication Vectors, no conditions are to be considered.

«W03 Homogeneity Vector»

Fig. 76 is a diagram for explaining a function to determine W03 Homogeneity Vector 4433's program composed of a series of codes which are concerned with the word of Word Identifier i belonging to Definitive Identifier k.

Homogeneity Vector mounted in W03 Pallet 4423 is a program composed of a series of codes which accord in the various points of the logical structure of the principle theoretical base shown in Fig. 76 concerning every word clarified in the W03 Pallet Word Table.

First, 'Private Sub L3 @%13@ @%15@()' (7601) is a functional part to determine Program Identifier L3(k,i) in programming language 'Visual Basic', and by substituting Definitive Identifier k and Word Identifier i into Independent Variable @k@ @i@, an identifier of the program composed of a series of codes can be determined.

For example, a program identifier of the Homogeneity Vector mounted on W03 Pallet of the word with its name <Product Code> and its Word Identifier <GOOD_CD> which is clarified in the W03 Pallet Word Table with its name <Product-wise Inventory Status Grasping Screen> and its Definitive Identifier <GDSTCDSCRN> can be univocally determined as <Private Sub L3_GDSTCDSCRN_GOOD_CD()> if coded into codes by using Visual Basic.

Also, for example, as to the word with its name <Reasonable Inventory> and its Word Identifier <STCD_LV> which is clarified in the W03 Pallet Word Table with its name <Product-wise Inventory Status Grasping Screen> and its Definitive Identifier <GDSTCDSCRN>, it is univocally determined as <Private Sub L3_GDSTCDSCRN_STCD_LV ()>.

Further to mention, as to the word having a name <Inventory management File> with Definitive Identifier <GDSTCDFILE> (clarified in the W03 Pallet Word Table) as well as having a name <Product Code> with Word Identifier <GOOD_CD> belonging thereto, it can be univocally determined as <Private Sub L3_GDSTCDFILE_ GOOD_CD()>.

What is meant by these codes is as follows: They are the programs (Private Sub) of 'Homogeneity Vector (L3) mounted on W03 Pallet' against the Definitive Identifier to which individual Word Identifiers and their words are belonging, and they were univocally determined by using Definitive Identifier k and Word Identifier i as independent variables.

The 'If W03.@k@.@i@ <>= "" Then Exit Sub End If' (7603) is a function to determine the logic of the 'Empty' (step 4435) as a program composed of a series of codes by programming language 'Visual Basic'.

For example, a program to execute the logic to check the word 'Empty' (step 4435) of the word with its Word name <Product Code) and its Word Identifier <GOOD_CD> which is clarified in W03 Pallet Word Table with its name <Product-wise Inventory Status Grasping Screen> and its Definitive Identifier <GDSTCDSCRN> can be univocally determined as <If W03.GDSTCDSCRN.GOOD_CD <> " " Then Exit Sub End If> if coded into codes by using Visual Basic.

Also, for example, a program to execute the logic to check the word 'Empty' (step 4435) of the word with its Word name <Reasonable Inventory> and its Word Identifier <STCD_LV> which is clarified in W03 Pallet Word Table with its name <Product-wise Inventory Status Grasping Screen> and its Definitive Identifier <GDSTCDSCRN> can be univocally determined as <If W03.GDSTCDSCRN.STCD_LV <> "" Then Exit Sub End If> if coded into codes by using Visual Basic.

These codes are a program to check if data code exists <<>""> in the data field (step 7501) <W3.GDSTCDSCRN.STCD_LV> of the address including three kinds of identifiers: self Word Identifier (STCD_LV), Definitive Identifier which lets the word belong to (GDSTCDSCRN) and W03 Pallet's identifier (W03).

The meaning of these codes viewed from the Providence of Existence is as follows: If it is not Event Unit-Link which can 'accept' the 'Association' from the Consciousness Unit-Link in which 'the Kuh' is established, the semantic quality of the word must have already synchronized with Consciousness meaning-space, therefore the process ends as it is without any execution.

On the other hand, a logic of 'Self Creation' (step 4437) in case of the 'Empty' (step 4435) check being TRUE is a function which determines a program composed of a series of codes, by using Definitive Identifier k, Word Identifier i and Input/Output Attribute %46 as Independent Variables, as follows:
$SELF $IF %46 eq 1
W3 @k@ @i@ = W02. @k@.@i@ $ENDIF
$IF $46 ne 1 W3 @k@ @i@ = W03.@k f @.@i@
$ENDIF $ENDSELF(7605a, 7605b, 7605c).

The meaning of 'accept' the 'Association' from the Consciousness Unit-Link in which 'the Kuh' is established is as follows: By taking the same word as the one that is Equivalent Logical Atom concerned with Consciousness Unit-Link in which 'the Kuh' is established as Equivalent Logical Atom of Event Unit-Link, a semantic space diameter of the divergent dense structure equivalent to the semantic space diameter of the Equivalent Logical Atom is substituted. Being equivalent means the same, and the substitution means to substitute value into the place where there is no value yet. Therefore, the 'Self Creation' (step 4437) means to determine, by the following codes, a Definitive possessing the same Word Identifier and already-existing value, for example, program composed of a series of codes into which data code of the data field on medium of File:
'$IF %46 ne 1 W3_ @k@ @i@ = W03.@kf@.@i@ $ENDIF' (7605b).

Accordingly, for example, a program to execute a logic of 'Self Creation' (step 4437) of the word with its word name <Product Code> and its Word Identifier <GOOD_CD> which is clarified in the W03 Pallet Word Table with its Definitive name <Product-wise Inventory Status Grasping Screen> and its Definitive Identifier <GDSTCDSCRN> can be univocally determined as <W3_GDSTCDSCRN_GOOD_CD = W03. GDSTCDFILE.GOOD_CD> if coded into codes by using Visual Basic.

Also, for example, a program to execute a logic of 'Self Creation' (step 4437) of the word with its word name <Reasonable Inventory> and its Word Identifier <STCD_LV> which is clarified in the W03 Pallet Word Table with its Definitive name <Product-wise Inventory Status Grasping Screen> and its Definitive Identifier <GDSTCDSCRN> can be univocally determined as <W3_GDSTCDSCRN_STCD_LV = W03. GDSTCDFILE.STCD_LD> if coded into codes by using Visual Basic.

Hereupon, the 'GDSTCDSCRN' is a Definitive Identifier of the name Inventory Management File, and it is an identifier concerned with Definitive which was drawn out at the stage of creating Homogeneity Map so as to satisfy the various points of the principle theoretical base.

Further to add, with the logic of 'Self Creation' (step 4437), besides the logic for substituting data code of the data field on the aforementioned Definitive possessing the same Word Identifier and already-existing value, for example, medium of File, another logic is also accepted which substitutes operational result of plural Word Identifiers and operator (that is, the four rules of arithmetic). In this instance, the operational expression is not univocal and becomes what is given by the person requiring software production, so it must be a function to reflect a requirement of such instance. To satisfy it, the '$SELF $ENDSELF' part shall be replaced by the requirement given externally.

Herein, the logic following the 'Self Creation' determines, by 'If W3 @k@ @i@ = "" Then Exit Sub End If' (7607), a logic of the 'Acceptance' (step 4439) to check the action of the 'Self Creation', that is, the materialization of Event Unit-Link 1417 as a program composed of a series of codes by using Definitive Identifier k and Word Identifier i as Independent Variables.

For example, the logic of 'Self Creation' (step 4439) of the word with its word name <Product Code> and its Word Identifier <GOOD_CD> which is clarified in the W03 Pallet Word Table with its Definitive name <Product-wise Inventory Status Grasping Screen> and its Definitive Identifier <GDSTCDSCRN> becomes <If W03.GDSTCDSCRN. GOOD_CD = " " Then Exit Sub End If> if coded into codes by using Visual Basic.

*Also, for example, as for the word with its name <Current Inventory> and its Word Identifier <INVNTRY>, it becomes a series of codes of <If W03.GDSTCDSCRN.INVNTRY = "" Then Exit Sub End If>. What is meant by this is as follows: It implements status examination on whether semantic quality of Consciousness Unit-Link in which 'the Kuh' is established has already been induced or not into data fields which take respective self Word Identifiers as their addresses. If the 'Acceptance' (step 4439) check is justified, it is univocally determined to be ending the process as it is.*

*However, there happens that a presenter of system development requirement may want to issue a warning message, for example, not to overlook a case in which a value of <Current Inventory> obtained for example by the Self Creation undergoes <Reasonable Inventory>. Also, similarly, the presenter of system development requirement may want to determine <Product Code> with the support of the <Product Lookup Screen> name when data does not exists in the data field on W03 Pallet which is identified by the name <Product Code> and Word Identifier <GOOD_CD>.*

*Hereupon, this logic of 'Acceptance' (step 4439) is simply examine on the presence of data in the data field on W03 Pallet, so such requirements cannot be satisfied. Thereupon, a means of satisfying these requirements is '$KAIKI If W3__ @k@ @i@ = "" Then Exit Sub End If $ENDKAIKI' (7609), and it shall be realized by enabling to replace the part enclosed in $KAIKI $ENDKAIKI by a requirement given externally.*

*The 'W03.@k@.@i@= W3 @k@ @i@ W03. @k@.@i@. Non = False W03_RECALL_FLG = True' (7611) is a function to determine the logic of the case in which the validity check gets TRUE as a program composed of a series*

*of codes by using Definitive Identifier k, Word Identifier i and Input/Output Attribute %46 as Independent Variables.*

*As explained above, programs of the W03 Pallet's Homogeneity Vector composed of a series of codes, i.e., even up to 1 (one) statement, can be univocally determined as a functional solution only based on Homogeneity Map, Word Table information and simple requirement concerned with Self Creation, and as a result, the uncertainty is eliminated.*

Also, the program of W03 Pallet's Homogeneity Vector which is composed of a series of codes only handles the object of the data field concerned with the self Word Identifier, and it only examines on the presence of data in the forefront 'Empty' (step 4435) judgment box, so it is 'an autonomous logic operating with conditions concerned with the self', and in other words, it is autonomous and an independent logic.

Also, additionally, since it does no action against non-self thus repetitive logic is not contained in the Homogeneity Vector, 'it does not affect changes against non-self' and 'there is no status change in itself'. Thus, it can be said to be a static' logical structure.

<<W03 Action Vector>>

Fig. 77 is a diagram for explaining conditions to induce the various points of the principle theoretical base of this invention concerning Action Vectors which are placed on W03 Pallet.

The Command Action Vector 7701 is an object which is always induced if there is Homogeneity Vector corresponding to words which belong to medium of File.

Also, the Work Requirement Action Vector 7702 is an object which is always induced if there are plural Given Words of Self Creation.

Also, the Routing Action Vector 7703 is an object which is always induced if there is the next W04 Pallet that starts to operate in accordance with the result of the materialization of various Homogeneity Vectors and Action Vectors.

Also, the Structural Adjustment Action Vector 7704 is an action to handle initialization of the Execute Done Flag of various Action Vectors, and it is an object which is always induced if Action Vector is prepared.

Fig. 78 is a diagram for explaining the relation between File-belonging word's Homogeneity Vector and Command Action Vector.

That is, as to words whose Given Words belong to File in the Self Creation of words belonging to Screen and Printouts, 'Reference-family' Homogeneity Vector 7803 is prepared for every word belonging to File, while also preparing 'OPEN-family Command Action Vector' 7801 and 'READ-family Command Action Vector' and 'CLOSE-family Action Vector' 7808. Also, when there are operational key meaning of 'Registration' as a direction from Screen, etc. and the other Directive Commands, 'Registration-family' Homogeneity Vector 7806 is prepared for every word belonging to File, while also preparing 'OPEN-family Command Action Vector' 7801 and 'WRITE-family Command Action Vector' 7807 and 'CLOSE-family Action Vector' 7808.

Fig. 79 is a flowchart for explaining the logical structure of the Command Action Vector. Step-wise explanation is as explained with the aforementioned Fig. 60.

Fig. 80 shows codes of the Command Action Vector which handles 'Reference' against File with its Definitive name <Inventory Management File> and its Definitive Identifier <GDSTCDFILE>.

The P3(r) (6001) in the flowchart of the Command Action Vector shown in Fig. 79 is a program identifier which identifies the start position of the program of this related Command Action Vector. The creating of the Command Action Vector program is done for every kind of actions (File Open, File Reference, File Entry, File Update or File Close) of the Direction against logical file that is identified by Definitive Identifier r or f.

An identifier which identifies this creating unit is called 'Action Operator', for example, the Command Action Vector which rules an action of Reference (the kind of Action: RD) to File with its logical file name Inventory Management File and its Identifier GDSTCDFILE can be expressed in Visual Basic programming language as follows: 'Private Sub P3 GDSTCDFILE_RD()' (8001).

The Execute (6003) in the flowchart of the Command Action Vector shown in Fig. 79 is a logic to examine on the condition to execute the issuance of the related Direction against the related File. This condition becomes a logic to examine whether the related program is not executed yet and also whether data code does not exist in the data field on the main memory concerned with the word with a Key to refer to the related File (for example, with its Definitive name Product-wise Inventory Status Grasping Screen and its Definitive Identifier GDSTCDSCRN and its word name Product Code and its Word Identifier GOOD_CD) and it can be expressed in Visual Basic programming language as follows:

'If W03.GDSTCDFILE_RD_FLG <> "" Ank W02.GDSTCDSCRN.GOOD_CD = Then Exist Sub EnD If' (8003).

The Execute Process (6005) in the flowchart of the Command Action Vector shown in Fig. 79 is a logic to issue File Reference Command assigned to the related program, and it can be expressed in Visual Basic programming language as follows:

'set SQL GDSTCDFILE = "select*from GDSTCDFILE. Where GOOD_CD = " & W02.GDSTCDSCRN.GOOD_CD & """

Set rs_ GDSTCDFILE = Db_GDSTCDFILE. OpenRecorDset(setSQL_ GDSTCDFILE.DbOpenDynamic)'(8005).

The Acceptance (6007) in the flowchart of the Command Action Vector shown in Fig. 79 is a logic to examine on Execute results of the Direction issued during the Execute Process, and it is expressed in Visual Basic programming language as follows, due to grammar's restriction: 'On Error GoTo ReaDError' (8007).

The Acceptance Process (6009) in the flowchart of the Command Action Vector shown in Fig. 79 is a logic when the Acceptance (6007) check's result was TRUE (accepted), and this is a logic to set into the data field on the main memory concerned with the word belonging to the related File and set Execute Done Flag of the related program, for example. in case of issuing Direction of File Reference. It is univocally determined as codes in Visual Basic programming language as shown by the Refusal Process (8011).

The Refusal Process (6017) in the flowchart of the Command Action Vector shown in Fig. 79 is a logic when the Acceptance (6007) check's result was FALSE (refused), and this becomes a logic to set Refusal Flag of the related program, for example, in case of firing Directive of File Reference. It is univocally determined as codes in Visual Basic programming language as shown by the Acceptance Process (8009).

The Work Requirement Action Vector is an object that is possibly induced only when the 'Self Creation' logic in Homegeneity Vector is an operational expression. That is, with the various points of the logical structure of the principle theoretical base possessed by the Homogeneity Vector's Acceptance Check, only the presence is checked concerning data code in the data filed of identified by the Word Identifier, so it is necessary to prepare Work Requirement Action Vector for such cases, for example, it is required to determine if File Entry process is terminated or not according to data code's contents, and, for example message to Screen operator must be edited according to its contents.

Fig. 81 is a flowchart for explaining the logical structure of the Work Requirement Action Vector.

Fig. 82 is a series of codes of the Work Requirement Action vector to check Reasonable Inventory. The P3 (j) in the flowchart of the Work requirement Action Vector shown in Fig. 81 is a program identifier to identify the start position of the program of the related Work Requirement Action Vector.

The creating unit of the Work requirement becomes necessitated when the number of words to auto-generate self (called Given Word) takes plural pieces of Self Creation logic, while designating Word Identifier to determine W03 Homogeneity Vector as self (called Self Word) in the Self Creation of W03 Homegeneity Vector.

For example, in case the self word is Reasonable Inventory (Word Identifier: INVENTRY) and the self creation is attempted by the following calculation: Current Inventory = Current Inventory + Arrival Product Quantity - Shipment Product Quantity, it corresponds to the case in which there is a necessity of Work Requirement for checking if Current Inventory is existent in the Reasonable Inventory Levels or not and doing process in accordance with the check result.

In this instance, an action of the 'Range Check of Current Inventory and Reasonable Inventory' is carried out by the Work Requirement Action Vector, and it becomes 'Private Sub P3_ME_INVNTRY_NG()' (8201), if expressed by using Visual Basic programming language.

The Execute (6003) in the flowchart of the Work Requirement Action Vector shown in Fig. 81 is a logic to examine on Execute of the related Work Requirement Action Vector. This condition only becomes a logic to check Execute Not Done of the related program, and it becomes 'If W03_ME_INVNTRTY_NG_FLG = "" Exit Sub EnD If' (8203), if expressed by using Visual Basic programming language.

The Execute Process (6005) in the flowchart of the Work Requirement Action Vector shown in Fig. 81 is a logic, for example, of the 'Range Check of Current Inventory and Reasonable Inventory' of the work requirement allocated to the related program. For example, if the condition is that the range of the reasonable inventory is less than 20 pieces, it becomes 'If Val(W03.GDSRCDSCRN.INVENTRY) < 20 Then W03_ME_INVNTRY_NG_FLG = "1" Exist Sub EnD If' (8205), if expressed by using Visual Basic programming language.

The Acceptance (6007) in the flowchart of the Work Requirement Action Vector shown in Fig. 81 is a logic (8207) to examine on the checked result of Execute Process which is W03_ME_INVNTRY_NG_FLG = "1".

The Acceptance Process (6009) in the flowchart of the Work Requirement Action Vector shown in Fig. 81 corresponds to a logic for the case where the checked result of the Acceptance (6007) was TRUE (accepted), and this logic becomes, in case of the action of the 'Range Check of Current Inventory and Reasonable Inventory', a logic of Execute Done Flag Set of the related program which is 'W03_ME_INVNTRY_NG_FLG = "1"' (8209).

The Refusal Process (6017) in the flowchart of the Work Requirement Action Vector shown in Fig. 81 corresponds to a logic for the case where the checked result of the Acceptance (6007) was FALSE (refused), and this logic becomes a logic of Refusal Flag Set of the related program, which is as follows: 'W03_ME_INVNTRY_NG_Non = True', and Refusal Flag Set of the word of inventory quantity, which is as follows: 'W03.GDSTCDSCRN.INVNTRY_Non = True' (8217).

The Routing Action Vector possesses a logical structure to set the Next Activate Pallet Identifier, the Next Send Screen Identifier and the continuation (Yes/No) of Scenario Chain, which are conditions for Restart Chain, Duplicate Chain, Multiplex Chain and their Unit-Link to be decided in accordance with the acceptance check results of the Homogeneity Vector and Action Vector and the presence state of the data field identified by the Word Identifier on W03 Pallet, as well.

Fig. 83 is a flowchart for explaining the logical structure of the Work Requirement Action Vector.

Fig. 84 is a series of codes of Routing Action Vector. The P3(j) (6001) in the flowchart of the Work Requirement Action Vector shown in Fig. 83 is a Program Identifier which identifies the start position of the program of the related Routing Action Vector. The creating of the Work Requirement Action Vector program is done for every condition to switch the next-activating W04 Pallet in accordance with the W03 Homogeneity Vector's Self Creation result, the Command Action Vector's Execute Process result and the Work Requirement Action Vector's Execute Process result.

For example, designating its Action Operator as RETCHAIN_1, it becomes 'Private Sub P3_ME_RETCHAIN_1()' (8401), if expressed by using Visual Basic programming language.

The Execute (6003) in the flowchart of the Routing Action Vector shown in Fig. 83 is a logic to examine on the condition to switch the related route. This condition becomes a logic (8417) to check on, for example, the Execute Not Done of the related program, which is 'W03_ME_RETCHAIN_1_FLG = "" and, as occasion needs, the W03 Homogeneity Vector's Self Creation result, the Command Action Vector's Execute Process result and the Work Requirement Action Vector's Execute Process result (8405).

The Execute Process (6005) in the flowchart of the Routing Action Vector shown in Fig. 83 is a logic to check on the condition to switch the related route. This condition becomes a logic of an action to switch routes allocated to the related program, and it becomes a series of codes to set the Next-Display Screen Identifier (CTRL.NxtSenID = ScrID_GDSTCDSCRN), the Next-Activate W04 Pallet Identifier (CTRL.NxtPltID = PltID_GDSRCDSCRNW04) and the Yes/No of Scenario Unit-Link (CTRL. Continue = True) (8405).

The Acceptance (6007) in the flowchart of the Routing Action Vector shown in Fig. 83 becomes a logic to examine on the checked result of the Execute Process (9407).

The Acceptance Process (6009) in the flowchart of the Routing Action Vector shown in Fig. 83 is a logic of the case where the Acceptance (6007) check result was TRUE (accepted), and this logic becomes a logic of Execute Done Flag Set of the related program, which is 'W03ME_RETCHAIN_1_FLG = "1" (8409).

The Refusal Process (6017) in the flowchart of the Routing Action Vector shown in Fig. 83 is a logic of the case in which the Acceptance (6007) check result was FALSE (refused), and this logic becomes a logic to set Refusal Flag of the related program (8417).

<<W04 Duplication Vector>>

Fig. 85 is a diagram for explaining a function which determines a program composed of W04 Duplication Vectors concerned with the words having Word Identifier i that belong to Definitive Identifier k.

Duplication Vectors mounted on W04 Pallet are created for every word clarified in the W04 Pallet Word Table, as a program composed of a series of codes, so as to observe the various points of the principle theoretical base possessed by the logical structure in accordance with the logical structure shown in Fig. 45.

First, 'Private Sub Y4 @k@ @i@ ()'(8501) is a functional part to determine Program Identifier Y4(k,i) in programming language 'Visual Basic', and by substituting Definitive Identifier k and Word Identifier i into Independent Variable @k@ @i@, an identifier of the program composed of a series of codes can be determined.

For example, a program identifier of the Duplication Vector mounted on W04 Pallet of the word with its name <Product Code> and its Word Identifier <GOOD_CD> which is clarified in the W04 Pallet Word Table with its name <Product-wise Inventory Status Grasping Screen> and its Definitive Identifier <GDSTCDSCRN> can be univocally determined as <Private Sub Y4_GDSTCDSCRN_GOOD_CD()> if coded into codes by using Visual Basic.

Also, for example, as to the word with its name <Reasonable Inventory> and its Word Identifier <STCD_LV>, it is univocally determined as <Private Sub Y4_GDSTCDSCRN_STCD_LV()>. The meaning of these codes is as follows: They are programs (Private Sub) which are 'Duplication Vector (Y4) mounted on W04 Pallet' against the Definitive Identifier that identifies individual Word Identifiers and the Screen to which those words belong, and they can be univocally determined by using Definitive Identifier k and Word Identifier i as Independent Variables.

The meaning of these codes is as follows: It is a program (Private Sub) of 'Duplication Vector (Y4) mounted on W04 Pallet' against the Definitive Identifier that identifies individual Word Identifiers and the Screen to which those words belong, and it has been univocally determined by using Definitive Identifier k and Word Identifier i as Independent Variables.

'If W02. @k@.@i@ ="" (8503) is a functional part to determine a logic to examine on the 'Empty' (step 4505) by 'Visual Basic' programming language, and by substituting Definitive Identifier k and Word Identifier i into Independent Variable @k@ @i@, the program composed of a series of codes can be determined.

For example, as to the word with its name <Product Code> and its Word Identifier <GOOD_CD> which is clarified in the W04 Pallet Word Table with its Definitive Identifier <GDSTCDSCRN>, it becomes a series of codes of <If W02.GDSTCDSCRN.GOOD_CD <>. Also, as to the word with its Word Identifier <GOOD_NM>, it becomes a series of codes of <If W02.GDSTCDSCRN.STCD_LV <> "" Then>.

What is meant by this is as follows: It is a check to see if data code exists or not in the data field on the W02 Pallet 4403 taking individual self Word Identifiers as their addresses, that is, if data code exists or not, which is Reduced as semantic quality of the Consciousness Unit-Link in which 'the Kuh' is established. Accordingly, when the 'Empty' check (step 4505) is accepted, data code shall be existent in the data field on the W02 Pallet 4403 taking individual self Word Identifiers as their addresses. That is, semantic quality of a synchronization-materializing Consciousness Unit-Link has been embodied via humans, and the semantic quality has been made synchronized with W03 Pallet 4423 that is Consciousness meaning-space 703 reduced into the computer space.

The W04 Pallet 4501 simulates Equivalent meaning-space 709, that is, it assumes the role to embody semantic quality of Consciousness Unit-Link in which 'the Kuh' is established into Natural meaning-space 701, so it becomes necessary to re-embody data code which has been already synchronized. Therefore, in case the 'Empty' (step 4505) check was accepted, it does Duplication (step 4507) (i.e., Copying) of the semantic quality of the data code in the data field 7501 on the W02 Pallet 4403 taking self Word Identifier as its address into the data field 8501 on the W04 Pallet 4501, thereby performing the embodiment.

For example, in case of the word with its name <Product Code> and its Word Identifier <GOOD_CD> which is clarified in the W04 Pallet Word Table with its Definitive Identifier <GDSTCDSCRN>, it becomes a series of codes of <W04. GDSTCDSCRN.GOOD_CD = W02. GDSTCDSCRN.GOOD_CD>. Also, as to the word with its name <Reasonable Inventory> and its Word Identifier <STCD_LV>, it becomes a series of codes of <W04. GDSTCDSCRN. STCD_LV = W02. GDSTCDSCRN. STCD_LV>.

On the other hand, in case the 'Empty' (step 4505) check was refused, it proceeds to the next 'Empty' (step 4513) judgement box which checks if semantic quality of Consciousness Unit-Link in which 'the Kuh' is established has been induced to W03 Pallet 4423 or not.

The 'If W03. @k@.@i@ <> "" Then W04. If W02. @k@.@i@ = W03. @k@.@i@ End If' (8505) means that it has been determined as a logical code to check on the 'Empty' by using Definitive Identifier k and Word Identifier i as Independent Variables. For example, in case of the word with its name <Product Code> and its Word Identifier <GOOD_CD> which is clarified in the W04 Pallet Word Table with its Definitive Identifier <GDSTCDSCRN>, it becomes a series of codes of <W03. GDSTCDSCRN.GOOD_CD <> "" Then>.

Also, in case of the word with its Word Identifier <GOOD_NM>, it becomes a series of codes of <W03. GDSTCDSCRN.STCD_LV <> "" Then>.

What is meant by this is as follows: It is a check to see if data code exists or not in the data field on the W03 Pallet 4423 taking individual self Word Identifiers as their addresses, that is, if semantic quality of the Consciousness Unit-Link in which 'the Kuh' is established has been already induced in the W03 Pallet's Homogeneity Vector. Accordingly, when the 'Empty' check (step 4513) was accepted, semantic quality induced in the Consciousness Unit-Link in which 'the Kuh' is established, in W03 Pallet 4423, becomes as data code in the data field 7505 on W03 Pallet 4423 taking self Word Identifier as its address, then it prepares for embodiment of the same data code into the data field 8501 of W04 Pallet 4501 also taking the same self Word Identifier as its address by duplicating (copying) it (step 4515).

For example, in case of the word with its name <Product Code> and its Word Identifier <GOOD_CD> which is clarified in the W04 Pallet Word Table with its Definitive Identifier <GDSTCDSCRN>, it becomes a series of codes of <W04. GDSTCDSCRN.GOOD_CD = W03. GDSTCDSCRN.GOOD_CD>.

Also, for example, in case of the word with its name <Reasonable Inventory> and its Word Identifier <STCD_LV>, it becomes a series of codes of <W04. GDSTCDSCRN. STCD_LV = W03. GDSTCDSCRN.STCD_LV>.

On the other hand, when the 'Empty' (step 4513) check is refused, it means that data code does not exist in the data field 7505 on the W03 Pallet 4423 taking individual self Word Identifiers, that is, semantic quality of Consciousness Unit-Link has not been induced. Therefore, it end the process as it is.

<<W04 Homogeneity Vector>>

Fig. 86 is a diagram for explaining a function to determine W04 Homogeneity Vector's program composed of a series of codes which are concerned with the word of Word Identifier i belonging to Definitive Identifier k.

Homogeneity Vector mounted on W04 Pallet creates its Program Identifier as a program composed of a series of codes for every word clarified in the W04 Pallet Word table by using 'Private Sub L4 @k@ @i@()' (8601).

For example, in case of the word with its name <Product Code> and its Word Identifier <GOOD_CD> which is clarified in the W04 Pallet Word Table with its Definitive Identifier <GDSTCDSCRN>, it becomes a series of codes of <L4_ GDSTCDSCRN_GOOD_CD>.

Also, for example, in case of the word with its Word Identifier <STCD_LV>, it becomes a series of codes of <L4_ GDSTCDSCRN_STCD_LV>.

Next, the 'If W04.@k@.@i@ <> W04.@k@.@i@ Then Exit Sub End If' (8603) is a function to determine the logic of the 'Empty' (step 4519) judgment box as a program composed of a series of codes by using Definitive Identifier k and Word Identifier i as Independent Variables. For example, in case of the word with its name <Product Code> and its Word Identifier <GOOD_CD> which is clarified in the W04 Pallet Word Table with its Definitive Identifier <GDSTCDSCRN>, it becomes a series of codes of <If W03.GDSTCDSCRN.GOOD_CD <> W03.GDSTCDSCRN.GOOD_CD Then Exit Sub End If>'.

Also, for example, in case of the word with its name <Reasonable Inventory> and its Word Identifier <STCD_LV>, it becomes a series of codes of <If W03.GDSTCDSCRN. STCD_LV <> W03.GDSTCDSCRN. STCD_LV Then Exit Sub End If>'.

What is meant by this is a check if data code is existent in the data field on W04 Pallet 4501 unconditionally taking individual self Word Identifiers as its address, that is, if data code as semantic quality of Consciousness Unit-Link in which 'the Kuh' is established exists or not, and it proceeds to the next 'Embodiment Edit' (step 4521) if this check is accepted. That is, when the 'Empty' check (step 4519) is accepted, semantic quality of Consciousness Unit-Link in which 'the Kuh' is established in the data field on W04 Pallet 4501 taking individual self Word Identifiers shall be embodied into Natural meaning-space 701, that is, to implement 'Embodiment Edit' (step 4521).

The $SELF W04.@k@.@i@ = W03. @k@.@i@ $ENDSELF' (8605) means to determine the logic of this 'Embodiment Edit' (step 4521) process box as a series of codes. Data codes embodied hereupon are, for example, such as attaching the ',' to every three digits to the data code or zero-suppressing in the data field prepared on the medium possessing the same Word Identifier i as well as being identified by Definitive Identifier k. To define externally such an embodiment edit method, the part enclosed by the $SELF $ENDSELF shall be replaced.

*On the other hand, when the 'Empty' check (step 4519) is refused, it means that semantic quality of Consciousness Unit-Link in which 'the Kuh' is established has not been induced into the data field 8501 which take individual self Word Identifiers as its address. This is a case either of the refusal of W02 Homogeneity Vector's 'Attribute Check' (step 4407) or of the refusal of W03 Homogeneity Vector's* Self Creation *(step 4437). However, it was unconditionally accepted with the 'Empty' (step 4519), so it is processed as 'Acceptance*'.

The 'If W02.@k@.@i@ Non = True Then W04.@k@.MSG = "@k@.@i@ W02error" W02.@k@.@i@_ Non = False Else If W03.@k@.@i@ Non True Then W04.@k@.@i@.MSG = @k@.@i@ W03error" W03.@k@.@i@ Non = False End If' (8607, 8609) means that it is a function to determine the logic as a series of codes which checks, by using Definitive Identifier k and Word Identifier i as Independent variables, either if the W02 Homogeneity Vector's 'Attribute Check' refusal or if the W03 Homogeneity Vector's Self Creation 'Refusal'.

For example, in case of the word with its name <Product Code> and its Word Identifier <GOOD_CD> which is clarified in the W04 Pallet Word Table with its Definitive Identifier <GDSTCDSCRN>, it becomes a series of codes of <If W02.GDSTCDSCRN.GOOD_CD_NON = True Or If W03. GDSTCDSCRN. GOOD_CD_NON = True Then>. Also, for example, in case of the word with its name <Reasonable Inventory> and its Word Identifier <STCD_LV>, it becomes a series of codes of <If W02.GDSTCDSCRN. STCD_LV_NON = True Or If W03. GDSTCDSCRN. STCD_LV_NON = True Then>.

When the 'Refusal' check is TRUE, that is, in case of either if the W02 Homogeneity Vector's Attribute Check (step 4407) is refused or if the W03 Homogeneity Vector's Self Creation (step 4437) is refused, it is necessary to notify the operator of this information processing system of the Refusal. Specifically, for example, it becomes a logic to set a code which determines the contents of the word with its name <Message Text> and its Word Identifier <MSGE_TX> which is clarified in the W04 Pallet Word Table.

For example, in case of the word with its name <Product Code> and its Word Identifier <GOOD_CD> which is clarified in the W04 Pallet Word Table with its Definitive Identifier <GDSTCDSCRN>, it becomes a series of codes of <If W04.GDSTCDSCRN.MSG = "GDSTCDSCRN. GOOD_CD W02error">.

Also, for example, in case of the word with its name <Reasonable Inventory> and its Word Identifier <STCD_LV>, it becomes a series of codes of <If W04.GDSTCDSCRN.MSG = "GDSTCDSCRN. STCD_LV W02error">. The <MSG> herein is a series of codes with a meaning of the message concerned with the word.

Further to add, after implementing the aforementioned process, the Refusal Flag shall be reset as follows:

W02.GDSTCDSCRN.GOOD_CD_NON = False
W03.GDSTCDSCRN.GOOD_CD_NON = False

The reason the Refusal Flag is reset is as follows: In the Providence of Existence, semantic quality is once embodied via Equivalent Unit-Link (W04 Pallet) and a new operation is implemented by the operator who recognized the embodied semantic quality. This is synonymous with that new Deuteronomy has been done from the Incomprehensible meaning-space, and when the Deuteronomy is newly done, Unit-Link existent until then is once dissolved. That is, all including Consciousness Unit-Link and Definite Unit-Link must become 'Empty' (that is, the operational process of W02 Pallet→W03 Pallet→W04 Pallet is implemented so as to empty data code set into the data field, even if the Refusal Flag). The Refusal Flag Reset simply implements it faithfully.

<<W04 Action Vector>>

Fig. 87 is a diagram for explaining conditions of inducing the various points of the principle theoretical base of the Action Vector mounted on W04 Pallet 4501 of the present invention.

The Structural Adjustment Action Vector 8701 is an object which is always induced so as to initialize the Refusal Flag and empty the data field of words belonging to File, if Homogeneity Vector corresponding to words belonging to File exists in W03 Pallet 4423.

Also, the Work requirement Action Vector 8703 is an object which is always induced when the Refusal Flag operator is required.

Also, the Routing Action Vector 8705 is always inducing in order to designate a self Screen.

Fig. 88 is a diagram to show the program that has coded the Structural Adjustment Action Vector that resets the W03 Refusal Flag of the word belonging to File into a series of codes by using Visual Basic programming language.

The 'Private Sub P4_ME_PCLEAR1()' (8801) is a part of the identifier of the program that resets the W03 Refusal Flag concerned with words belonging to File, and indicates that it has been realized simply by substituting identifiers which were defined in the W04 Pallet Word Table of Fig. 69.

Next, the 'If W04_ME_PCLEAR1_FLG = "" Then' (8802) is a part of the Execute Judgment, and it checks no setting of Execute Done Flag of the related program. And, it indicates that it has been realized similarly by substituting identifiers which were defined in the W04 Pallet Word Table of Fig. 69.

Next, the 'W03.GDSTCDFILE_GOOD_CD_Non = False',
'W03.GDSTCDFILE_GOOD_NM_Non = False',
'W03.GDSTCDFILE_STCD_LV_Non = False' and
'W03.GDSTCDFILE_GOOD_CD_Non = False' and
'W03. .GDSTCDFILE_FAILGDV_Non' (8803) is a part of Execute Process, and it is a program which resets W03 Refusal Flag concerned with all words belonging to File. Then, the Refusal Flag to be reset indicates that it has been realized simply by substituting identifiers of the words belonging to File that were defined in the W03 Pallet Word Table of Fig. 73, i.e., 9-1, 9-2, 10-1, 10-2 and 10-3 in Fig. 73.

Fig. 89 is a diagram to show the program that has coded the Structural Adjustment Action Vector that initializes the data field on W03 Pallet of the word belonging to File into a series of codes by using Visual Basic programming language.

The 'Private Sub P4_ME_PCLEAR2()' (8901) is a part of the identifier of the program that initializes the data field on W03 Pallet of the word belonging to File and indicates that it has been realized simply by substituting identifiers which were defined in the W04 Pallet Word Table of Fig. 69.

Next, the 'If W04_ME_PCLEAR2_FLG = "" Then' (8902) is a part of Execute Judgment, and it examine on no setting of Execute Done Flag of the related program. Then, it indicates that it has been realized simply by substituting identifiers which were defined in the W04 Pallet Word Table of Fig. 69.

Next, the 'W03.GDSTCDFILE_GOOD_CD = "", 'W03.GDSTCDFILE_GOOD_NM = "", 'W03.GDSTCDFILE_STCD_LV = "" and 'W03.GDSTCDFILE_STCD_LV = "" (8903) is a part of Execute Process, and it is a program which initializes the data field on the W03 Pallet concerned with all words belonging to File. And, it indicates that the data field to be initialized has been realized simply by substituting identifiers of the words belonging to File that were defined in the W03 Word Table of Fig. 73.

Fig. 90 is a diagram to show the program that has coded the Routing Action Vector into a series of codes by using Visual Basic programming language.

The 'Private Sub P4_ME_GDSTCDSCRNRT()' (9001) is a part of the identifier of the program called Roue Setting Action vector, and it indicates that it has been realized simply by substituting identifiers defined in the W04 Word Table of Fig. 69.

Next, the 'If W04_ME_GDSTCDSCRNRT_FLG <> "" Then Exit Sub EnD If' (9002) is a part of Execute Judgment, and it is a logic to end the process if Execute Done Flag of the related program has already been set. It similarly indicates that it has been realized simply by substituting identifiers defined in the W04 Word Table of Fig. 69.

Next, the 'CTRL.NxtScrID = ScrID_GDSTCDSCRN' (9003) is a part of Execute Process, and it is a logic to set the identifier of the next-to-display Screen Identifier into the data field with address of CTRL.NxtScnID.

Also, the 'CTRL.NxtPltID = PltID_GDSTCDSCRNE02' (9004) is a part of Execute Process, and it is a logic to set the identifier of the next-to-activate W02 into the data field with address of CTRL.NxtPltID. Also, 'CTRL.Continue = True' (9005) is a part of Execute Process, and it is a logic to set the intention of requiring Scenario Chain into the data field with an address of CTRL.Continue. The Execute contents represent that it has been univocally realized based on the information inscribed on the Homogeneity Map.

<Creation of Pallet Function (step 6409)>

The creation of Pallet Function is a work to create a program composed of a series of codes called 'Pallet Function' which binds the logic of a series of codes of the created Tense Control Vector and Action Vector as well as the data fields that are used as objects of those logics' process, into as W02 Pallet, W03 pallet and W04 Pallet, by observing the various points of the logical structure of the principle theoretical base possessed by each of them.

<<W02 Pallet Function>>

The W02 Pallet Function is a program which processes 'Convergent Dense Set' 1401 to materialize Definite Unit-Link 1413, Convergent Rule to construct it, and Logical Structure of Contingent Rule to be established in it, as a series of codes, so as to Reduce them into the computer space.

Fig 55 is a functional block diagram induced from the various points of the logical structure of the principle theoretical base, and it explains the Pallet Function creating method by which, as already explained, the Pallet Function belonging to W02 Pallet can be made by placing unit programs (Homogeneity Vector) of individual Word Identifiers with no consideration of their processing sequence.

First, as shown by the Fig., in the Pallet Function belonging to W02 Pallet, Program Identifier ϕp(k,2) (step 5501) of Pallet Function means to be a series of code that are determined with Definitive Identifier k as Independent Variable. Herein, Definitive Identifier k means to be identifier that identifies a medium of Screen.

For example, a program identifier of the Pallet Function mounted on W02 Pallet which is concerned with the <Product-wise Inventory Status Grasping Screen> and the <GDSTCDSCRN> Definitive Identifier becomes <Private Sub GDSTCDSCRNW02 ()> if programmed as a series of codes by using Visual Basic.

What is meant by these codes is as follows: It is a program (Private Sub) of 'Pallet Function ϕp(k,2) mounted on W02 Pallet' against the Definitive Identifier, it was univocally determined by taking Definitive Identifier k as Independent Variable.

When W02 Pallet Function begins to operate, it checks, at first, if the End conditions are satisfied or not (step 5503) (specifically, to check whether'Tense Control Vector End Flag' or 'If End Flag is "1" or not'.), and in case the End conditions are satisfied, it returns to Pallet Chain Function by the W02 Pallet Function End (step 5505).

In case the End conditions are not satisfied, it makes judgment of the 'Tense Control Vector Activate Condition' judgment box (step 5507) (specifically, to check whether 'Tense Control Vector End Flag' is "1" or not'.).

If the Tense Control Vector Activate Condition is satisfied, a group of Tense Control Vector-related unit programs are activated in the 'Tense Control Vector Activate' process box (step 5509). In the group of the unit programs related to Tense Control Vector, unit programs (Homogeneity Vector) of individual Word Identifiers can be placed without considering their processing sequence.

Next, upon returning from a group of Tense Control Vector-related unit programs, it makes judgment on whether Restart is required or not, that is, on the 'Restart Flag Set Done' judgment box (step 5511), and if Restart is required, it reactivates a group of Tense Control Vector-related unit programs (step 5521).

If Restart is not required, it implements a logic of 'Set "1" to Tense Control Vector End Flag.' in the 'Tense Control Vector End Flag Set' (step 5513), then it hands down process thereafter to the forefront End Condition judgment (5503).

Next, in case the End conditions are satisfied, it sets, for assurance, the End Flag in the 'End Flag Set' process box (step 5517), then the process returns to the forefront of Pallet Function.

Mentioned next (from asterisk to asterisk) shows the result of coding Pallet Function into codes which is mounted on W02 Pallet concerned with the <Product-wise Inventory Status Grasping Screen> and the <GDSTCDSCRN> Definitive Identifier by the aforementioned method in 'Visual Basic' programming language.

```
'*************************************************************
Public Sub GDSTCDSCRNW02()
'<Control Flag Initialize>·····*
 P2_INIT_FLG = ""
 P2_L_FLG = ""
 P2_END_FLG = ""
'<Control>·····*
Main_Chk:
'··· End Judgment ···
 If P2_END_FLG = "1" _
   Or (P2_INIT_FLG = "1" _
   AnD P2_L_FLG = "1") Then
      GoTo Main_EnD
 EnD If
'····Φ P·P group (Initialize Process)
If P2_INIT_FLG = ""
AnD P2_L_FLG = ""Then
'·········<Initially-set Group Activate
     Call P2_INIT_PROC
'·········<Execute Done
     P2_ INIT_FLG = "1"
     GoTo Main_Chk
 EnD If
'··· L Group ···
```

```
 If P2_ INIT_FLG = "1"
 AnD P2_L_FLG = "" Then
'·········<Homogeneity Vector Group Activate
    Call P2_L_PROC
'·········<Execute Done
    P2_L_FLG = "1"
    GoTo Main_Chk
 EnD _If
'··· All End Check ···
 If P2_ INIT_FLG = "1" _
 AnD P2_L_FLG = "1" Then
    P2_END_FLG = "1"
    GoTo Main_Chk
 EnD _If
Main_EnD
EnD Sub
'*******************************************
'* W02 Initial Process Group
' ****************************************
 Public Sub P2_INIT_PROC()
 'Restart Counter Initial Setting
  W02_GDSTCDSCRN_GOOD_CD_CNT = 0
  W02_GDSTCDSCRN_GOOD_NM_CNT = 0
  W02_GDSTCDSCRN_STCD_LV_CNT = 0
  W02_GDSTCDSCRN_INVNTRY_CNT = 0
  W02_GDSTCDSCRN_PF1_KEY_CNT = 0
```

```
W02_GDSTCDSCRN_PF3_KEY_CNT = 0
W02_GDSTCDSCRN_MSG_CD_CNT = 0
W02_GDSTCDSCRN_MSG_TX_CNT = 0
EnD Sub
'*    L2 Group
Public Sub P2_L_PROC()
 Call L2_GDSTCDSCRN_GOOD_CD
 Call L2_GDSTCDSCRN_GOOD_VN
 Call L2_GDSTCDSCRN_STCD_LV
 Call L2_GDSTCDSCRN_INVNTRY
 Call L2_GDSTCDSCRN_PF1_KEY
 Call L2_GDSTCDSCRN_PF3_KEY
 Call L2_GDSTCDSCRN_MSGE_CD
 Call L2_GDSTCDSCRN_MSGE_TX
EnD Sub
'******************************************
```

The 'Private Sub P2_GDSTCDSCRNW02()' is a code column which corresponds to the part (5501) of the identifier of the program of the related W02 Pallet Function, and indicates that it has been realized simply by substituting Screen Identifier.

Next, the 'P2_INIT_FLG = "", P2_L_FLG = "" and 'P2_END_FLG = "" are codes to implement initialization of various kinds of End Condition, and the 'P2_INIT_FLG' is a flag to manage the Initialize Process End Condition in W02 Pallet, the 'P2_L_FLG' is a flag to manage the End Condition of W02 Homogeneity Vector and the 'P2_END_FLG' is a flag to manage the End Condition of the End Condition Judgment Process of W02 Pallet. These codes which implement initialization of various kinds of End Condition correspond to the part (5501) of identifier of the program of W02 Pallet Function.

Next, the 'If P2_END_FLG = "1" Or (P2_INIT_FLG = "1" AnD P2_L_FLG = "1") Then GoTo Main_EnD EnD If' is a series of codes which correspond to the 'End Condition' (5503). That is, it is a logic to implement the following: Among the various kinds of the End Condition of W02 Pallet, it checks whether the flag (P2_END_FLG) has been already set or not, which manages the End Condition of the W02 Pallet's End Condition Judgment Process, or it checks if both of the flag (P2_INIT_FLG) to manage the Initialize Process End Condition in W02 Pallet and the flag (P2_L_FLG) to manage the End Condition of W02 Homogeneity Vector have been already set or not, and if the check result is TRUE, the process proceeds to the 'W02 Pallet Function's End' (5505).

Next, the 'P2_INIT_FLG ="" AnD P2_L_FLG = "" Then Call P2_INIT_PPROC 2P_ INIT_FLG = "1" GoTo Main_ChD Enk If' is not clearly shown in Fig. 55, but it is a logic to proceed to the execution of the Initialize Process in W02 Pallet if the condition to execute Initialize Process in W02 Pallet and its check is TRUE. That is, it checks whether both of the flag (P2_INIT_FLG) to manage the Initialize Process End Condition in W02 Pallet and the flag (P2_L_FLG) have already been set or not, and when the check result is TRUE, the process proceeds to the execution of the Initialize Process in W02 Pallet (Call P2_INIT_PPROC). And, after ending the Initialize Process, the flag (P2_INIT_FLG) to manage the Initialize Process End Condition in W02 Pallet is set (P2_INIT_FLG = "1"), it returns to the forefront (GoTo Main_Chk).

Next, the 'If P2_INIT_FLG = "1" AnD P2_L_FLG = "" Then Call P2_L_PROC P2_L_FLG = "1" GoTo Main_Chk EnD If' is a series of codes which correspond to 'Tense Control Vector Activate Condition' (5507), 'Tense Control Vector Activate' (5509), 'Tense Control Vector End Flag Set' (5513) and 'To End Condition' (5514).

That is, it checks that the flag (P2_INIT_FLG) to manage the Initialize Process End Condition in W02 Pallet has been set and if the flag (P2_L_FLG) to manage the End Condition of W02 Homogeneity Vector have been already set or not (5507), and when the check result is TRUE, the process proceeds to W02 pallet's Tense Control Vector Activate (Call P2_L_PROC) (5509). And, after ending process of Tense Control Vector, the flag to manage the Initialize Process End Condition in W02 Pallet is set (P2_L_FLG = "1"), it returns to the forefront (GoTo Main_Chk) (5514). Next, the 'If P2_INIT_FLG = "1" AnD P2_L_FLG = "1" Then P2_END_FLG = "1" GoTo Main_Chk EnD If' is a series of codes which correspond to 'End' (5515), and 'End Flag Set' (5517), and 'To End Condition' (5519). That is, it checks whether both that the flag (P2_INIT_FLG) to manage the Initialize Process End Condition in W02 Pallet and that the flag (P2_L_FLG) to manage the End Condition of W02 Homogeneity Vector have been already set or not (5515), and when the check result is TRUE, the process returns to the forefront (GoTo Main_Chk) (5519) after setting W02 Pallet's End Flag (5517).

Next, the 'Public Sub P2_INIT_PROC()', 'W02_GDSTCDSCRN_GOOD_CD_CNT = 0', 'W02_GDSTCDSCRN_GOOD_NM_CNT = 0', 'W02_ GDSTCDSCRN_ STCD_ LV_CNT = 0', 'W02_GDSTCDSCRN_INVNTRY_CNT = 0', 'W02_ GDSTCDSCRN_ PF1_KEY_CNT = 0', 'W02_GDSTCDSCRN_PF3_KEY_CNT = 0', 'W02_GDSTCDSCRN_MSG_CD_CNT = 0', 'W02_GDSTCDSCRN_MSG_TX_CNT = 0', 'EnD Sub' is a program of Initialize Process in W02 Pallet.

The 'Public Sub P2_INIT_PROC()' is a series of codes which correspond to the part of the identifier of the Initialize Process program. Also, the 'W02_GDSTCDSCRN_GOOD_CD_CNT = 0', 'W02_ GDSTCDSCRN_ GOOD_NM_CNT = 0', 'W02_ GDSTCDSCRN_ STCD_ LV_CNT = 0', 'W02_GDSTCDSCRN_INVNTRY_CNT = 0', 'W02_ GDSTCDSCRN_ PF1_ KEY_CNT = 0', 'W02_GDSTCDSCRN_PF3_KEY_CNT = 0', 'W02_ GDSTCDSCRN_MSG_CD_CNT = 0', 'W02_GDSTCDSCRN_MSG_TX_CNT = 0' is a program logic to initialize Restart Counter. That is, it indicates that it has been realized simply by substituting identifiers which were defined in the W02 Pallet Word Table of Fig. 70.

Next, the 'Public Sub P2_L_PROC() Do', 'W02_RECALL_FLG = False', 'Call L2_GDSTCDSCRN_GOOD_CD', 'Call L2_GDSTCDSCRN_GOOD_VN', 'Call L2_GDSTCDSCRN_STCD_LV', 'Call L2_GDSTCDSCRN_INVNTRY', 'Call L2_GDSTCDSCRN_PF1_KEY', 'Call L2_GDSTCDSCRN_PF3_KEY', 'Call L2_GDSTCDSCRN_MSGE_CD', 'Call L2_GDSTCDSCRN_MSGE_TX', 'Loop Until W02_RECALL_FLG = False', 'EnD Sub' is a program logic which corresponds to the detail part of 'Tense Control Vector Activate' (5509) and the part of 'Restart Flag Set Done' (5511).

That is, it is a logic to set Restart Flag in advance before activating each Tense Control Vector every time when repetition process (Do) is implemented (W02_RECALL_FLG = False), and until restart Flag is set thereafter (Until W02_RECALL_FLG = False), it activates Tense Control Vector mounted on W02 Pallet. These codes indicate that they have been realized simply by substituting identifiers which were defined in the W02 Pallet Word Table of Fig. 70

It is a logic to proceed to the execution of Initialize Process in W02 Pallet when the results of the check of the Condition and the check are TRUE. That is, it checks if both of the flag (P2_INIT_FLG) to manage the Initialize Process End Condition in W02 Pallet and the flag (P2_L_FLG) to manage the End Condition of W02 Homogeneity Vector have been already set or not, and if the check result is TRUE, the process proceeds to Initialize Process in W02 Pallet (Call P2_INIT_PROC). And, after ending the Initialize Process, the flag (P2_INIT_FLG) to manage the Initialize Process End Condition in W02 Pallet is set (P2_INIT_FLG = "1"), it returns to the forefront (GoTo Main_Chk).

<<W03 Pallet Function>>

The W03 Pallet Function is a program realized as a series of codes so as to materialize 'Convergent Dense Set' 1401 to materialize Definite Unit-Link 1413, 'Convergent Rule' to construct it, and Logical Structure of the 2$^{nd}$ and 3$^{rd}$ Contingent Rule to be established in it, as what shall be reduced into the computer space.

Fig. 57 is a flowchart for explaining the Pallet Function creating method by which, as already explained, the Pallet Function belonging to W03 Pallet can be made by placing unit programs (Duplication Vector and Homogeneity Vector) of individual Word Identifiers with no consideration of their processing sequence.

As shown in the Fig., in Pallet Function belonging to W03 Pallet, the check is implemented on whether the End Conditions are satisfied or not (specifically, if (READ-family) Command Action Vector End Flag, Tense Control Vector End Flag, (non- READ-family) Command Action Vector End Flag and End Flag are set to "1" or not) (step 5703), and when the End Conditions are satisfied, the process returns to Pallet Chain Function by 'W03 Pallet's End' (step 5705).

Next, when the End Conditions are not satisfied, the examination on whether the '(READ-family) Command Action Vector Activate Condition' is satisfied or not (concretely, if the (READ-family) Command Action Vector End Flag is "1" or not) is implemented in the '(READ-family) Command Action Vector Activate Condition' judgment box (step 5707).

When the '(READ-family) Command Action Vector Activate Condition' is satisfied, the group of the unit programs of (READ-family) Command Action Vector are activated in the '(READ-family) Command Action Vector Activate' process box (step 5709).

In the activated unit program group of the (READ-family) Command Action Vector, unit programs of every action operator (Command Action Vectors of File Open and File Reference) are arranged without the necessity of considering process sequence.

Next, upon returning from the unit program group of the (READ-family) Command Action Vector, the logic to set the (READ-family) Command Action Vector End Flag to "1" is implemented in the '(READ-family) Directive Action Vector End Flag Set' process box (step 5711) and thereafter End or not (specifically, if the '(READ-family) Command Action Vector End Flag is "1" or not) is judged in the 'End' judgment box (step 5713). When the End Condition is not satisfied (5714), the process returns to the forefront of the Pallet Function. And when the End Condition is satisfied (5715), it returns to the forefront of the Pallet Function after setting the End flag to "1".

When the (READ-family) Command Action Vector Activate Conditions are not satisfied, the judgment on whether the Tense Control Vector Activate Condition is satisfied or not (specifically, if the (READ-family) Command Action Vector End Flag is "1" as well as if the Tense Control Vector End Flag is not "1" or otherwise) is implemented in the Tense Control Vector Activate Condition judgment box (step 5717), and when the Tense Control Vector Activate Condition is satisfied, the Tense Control Vector-related unit program group is activated in the Tense Control Vector Activate process box (step 5719). With the activated Tense Control Vector-related unit program group, unit programs of every Word Identifier (Duplication Vector and Homogeneity Vector) are arranged without the necessity of considering process sequence.

Next, upon returning from the Tense Control Vector-related unit program group, the judgment on whether Restart is required or not is implemented in the 'Restart Flag Set Done' judgment box (step 5271). If required, the Tense Control Vector-related unit program group is re-activated (step 5719), but if not required, a logic to set Tense Control Vector End Flag to "1" is implemented in Tense Control Vector End Flag Set (step 5723).

Further, the judgment on whether End or not (specifically, if the (READ-family) Command Action Vector End Flag, the Tense Control Vector End Flag and the End Flag are "1" or not) is implemented in the 'End' judgment box (step 5725). When the End Condition is satisfied, the End Flag is set, for assurance, in the 'End Flag Set' process box (step 5725), then the process returns to the forefront of Pallet Function. When the End Condition is not satisfied (5726), the process returns to the forefront of Pallet Function.

When the Tense Control Vector Activate Condition is not satisfied, the check both on whether the (non-READ-family) Command Action Vector End Flag and the Tense Control Vector End Flag are "1" and on whether the (non-READ-family) Command Action Vector End Flag is not "1" or otherwise) is implemented in the (non-READ-family) Command Action Vector Activate Condition judgment box (step 5731), and when the (non-READ-family) Command Action Vector Activate Condition is satisfied, the (non-READ-family) Command Action Vector's unit program group is activated in the (non-READ-family) Command Action Vector Activate' process box (step 5729).

With the activated unit program group of the (READ-family) Command Action Vector, unit programs of every action operator (Work Requirement Action Vectors, File Registration/Update Command Action Vector and Routing Action Vector) are arranged without the necessity of considering process sequence.

Next, upon returning from the unit program group of the (non-READ-family) Command Action Vector, the logic to set the (non-READ-family) Command Action Vector End Flag to "1" is implemented in the '(non-READ-family) Command Action Vector End Flag Set' process box (step 5733) and thereafter the judgment on whether End or not (specifically, if the '(READ-family) Command Action Vector End Flag, Tense Control Vector End Flag, (non-READ-family) Command Action Vector End Flag and End Flag are "1" or not) is implemented in the 'End' judgment box step 5735). When the End Condition is not satisfied (5736), it returns to the forefront of the Pallet Function, and when the End Condition is satisfied, it sets, for assurance, the End Flag to "1" in the 'End Flag Set' process box (step 5737), then the process returns to the forefront of Pallet Function.

*Mentioned next (from asterisk to asterisk) shows the result of coding Pallet Function into codes in the aforementioned method by Visual Basic, which is mounted on W03 Pallet concerned with the Homogeneity Map of the work of, for example, the <Product-wise Inventory Status Grasping>.*

```
'***********************************************************
Public Sub W03()
'<Control Flag Initialize>······*
 P3_INIT_FLG = ""
 P3_POP_FLG = ""
 P3_PRD_FLG = ""
 P3_YL_FLG = ""
 P3_PCH_FLG = ""
 P3_PWT_FLG = ""
 P3_PCL_FLG = ""
 P3_PRT_FLG = ""
 P3_PCR_FLG = ""
 P3_END_FLG = ""
'<Control>······*
Main_Chk:
'··· End Judgment ···
 If P3_END_FLG = "1" _
   Or (P3_INIT_FLG = "1" _
   AnD P3_POP_FLG = "1" _
   AnD P3_PRD_FLG = "1" _
   AnD P3_YL_FLG = "1" _
   AnD P3_PCH_FLG = "1" _
   AnD P3_PWT_FLG = "1" _
   AnD P3_PCL_FLG = "1" _
   AnD P3_PRT_FLG = "1" _
   AnD P3_PCR_FLG = "1" Then
```

```
        GoTo Main_EnD
    EnD If
   '··· φp·P Group (Initial Process) ···
    If P3_INIT_FLG = "" _
     AnD P3_POP_FLG = "" _
     AnD P3_PRD_FLG = "" _
     AnD P3_YL_FLG = "" _
     AnD P3_PCH_FLG = "" _
     AnD P3_PWT_FLG = "" _
     AnD P3_PCL_FLG = "" _
     AnD P3_PRT_FLG = "" _
     AnD P3_PCR_FLG = "" Then
   '·········· < Activate of Initialized Group
       Call P3_INIT_PROC
   '·········· < Execute Done
       P3_INIT_FLG = "1"
       GoTo Main_Chk
    EnD If
   '··· Open Command Action Vector Group ···
    If P3_INTI_FLG = "1" _
     AnD P3_POP_FLG = "" _
     AnD P3_PRD_FLG = "" _
     AnD P3_YL_FLG = "" _
     AnD P3_PCH_FLG = "" _
     AnD P3_PWT_FLG = "" _
     AnD P3_PCL_FLG = "" _
```

```
   AnD P3_PRT_FLG = "" _
   AnD P3_PCR_FLG = "" Then
'---------- < Activate of Open Command Action Vector Group
      Call P3_POP_PROC
'---------- < Execute Done
      P3_POP_FLG = "1"
      GoTo Main_Chk
 EnD If
'--- READ Command Action Vector Group ---
 If P3_INIT_FLG = "1" _
   AnD P3_POP_FLG = "1" _
   AnD P3_PRD_FLG = "" _
   AnD P3_YL_FLG = "" _
   AnD P3_PCH_FLG = "" _
   AnD P3_PWT_FLG = "" _
   AnD P3_PCL_FLG = "" _
   AnD P3_PRT_FLG = "" _
   AnD P3_PCR_FLG = "" Then
'---------- < Activate of READ Command Action Vector Group
      Call P3_PRD_PROC
'---------- < Execute Done
      P3_PRD_FLG = "1"
      GoTo Main_Chk
 EnD __If
'--- Tense Control Vector Group ---
 If P3_INIT_FLG = "1" _
```

```
    AnD P3_POP_FLG = "1" _
    AnD P3_PRD_FLG = "1" _
    AnD P3_YL_FLG = "" _
    AnD P3_PCH_FLG = "" _
    AnD P3_PWT_FLG = "" _
    AnD P3_PCL_FLG = "" _
    AnD P3_PRT_FLG = "" _
    AnD P3_PCR_FLG = "" Then
'---------- < Activate of Tense Control Vector Group
      Call P3_YL_PROC
'---------- < Execute Done
      P3_YL_FLG = "1"
      GoTo Main_Chk
  EnD If
'--- Work Requirement Action Vector Group ---
  If P3_INIT_FLG = "1" _
    AnD P3_POP_FLG = "1" _
    AnD P3_PRD_FLG = "1" _
    AnD P3_YL_FLG = "" _
    AnD P3_PCH_FLG = "" _
    AnD P3_PWT_FLG = "" _
    AnD P3_PCL_FLG = "" _
    AnD P3_PRT_FLG = "" _
    AnD P3_PCR_FLG = "" Then
'---------- < Activate of Work Requirement Action Vector Group
      Call P3_PCH_PROC
```

```
'·········· < Execute Done
    P3_PCH_FLG = "1"
    GoTo Main_Chk
  EnD If
'··· WRITE Command Action Vector Group ···
  If P3_INIT_FLG = "1" _
   AnD P3_POP_FLG = "1" _
   AnD P3_PRD_FLG = "1" _
   AnD P3_YL_FLG = "1" _
   AnD P3_PCH_FLG = "1" _
   AnD P3_PWT_FLG = "" _
   AnD P3_PCL_FLG = "" _
   AnD P3_PRT_FLG = "" _
   AnD P3_PCR_FLG = "" Then
'·········· < Activate of WRITE Command Action Vector Group
     Call P3_PWT_PROC
'·········· < Execute Done
    P3_PWT_FLG = "1"
    GoTo Main_Chk
  EnD If
'··· CLOSE Command Action Vector Group ···
  If P3_INTI_FLG = "1" _
   AnD P3_POP_FLG = "1" _
   AnD P3_PRD_FLG = "1" _
   AnD P3_YL_FLG = "1" _
   AnD P3_PCH_FLG = "1" _
```

```
  AnD P3_PWT_FLG = "1" _
  AnD P3_PCL_FLG = "" _
  AnD P3_PRT_FLG = "" _
  AnD P3_PCR_FLG = "" Then
'---------- < Activate of CLOSE Command Action Vector Group
    Call P3_PCL_PROC
'---------- < Execute Done
    P3_PCL_FLG = "1"
    GoTo Main_Chk
 EnD If
'--- Routing Action Vector Group ---
 If P3_INTI_FLG = "1" _
  AnD P3_POP_FLG = "1" _
  AnD P3_PRD_FLG = "1" _
  AnD P3_YL_FLG = "1" _
  AnD P3_PCH_FLG = "1" _
  AnD P3_PWT_FLG = "1" _
  AnD P3_PCL_FLG = "1" _
  AnD P3_PRT_FLG = "" _
  AnD P3_PCR_FLG = "" Then
 '---------- < Activate of Routing Action Vector Group
    Call P3_PRT_PROC
'---------- < Execute Done
    P3_PRT_FLG = "1"
    GoTo Main_Chk
 EnD If
```

```
'--- Structural Action Vector Group ---
 If P3_INTI_FLG = "1" _
  AnD P3_POP_FLG = "1" _
  AnD P3_PRD_FLG = "1" _
  AnD P3_YL_FLG = "1" _
  AnD P3_PCH_FLG = "1" _
  AnD P3_PWT_FLG = "1" _
  AnD P3_PCL_FLG = "1" _
  AnD P3_PRT_FLG = "1" _
  AnD P3_PCR_FLG = "" Then
'---------- < Activate of Structural Action Vector Group
     Call P3_PCR_PROC
'---------- < Execute Done
     P3_PCR_FLG = "1"
     GoTo Main_Chk
 EnD If
'--- Check of All End ---
 If P3_INTI_FLG = "1" _
  AnD P3_POP_FLG = "1" _
  AnD P3_PRD_FLG = "1" _
  AnD P3_YL_FLG = "1" _
  AnD P3_PCH_FLG = "1" _
  AnD P3_PWT_FLG = "1" _
  AnD P3_PCL_FLG = "1" _
  AnD P3_PRT_FLG = "" _
  AnD P3_PCR_FLG = "1" Then
```

```
    P3_END_FLG = "1"
    GoTo Main_Chk
  EnD If
Main_EnD:
EnD Sub
'* W03 Initial Process Group
Public Sub P3_INTI_PROC()
'=== File - WFL Area Initialize Setting
  WFL_GDSTCDFILE_GOOD_CD = ""
  WFL_GDSTCDSCRN_GOOD_NM = ""
  WFL_GDSTCDSCRN_STCD_LV = ""
  WFL_GDSTCDSCRN_INVNTRY = ""
  WFL_GDSTCDSCRN_GOOD_CD = ""
  WFL_GDSTCDSCRN_GOOD_NM = ""
'Restart Counter Initialize Setting
'===== Screen Word's Restart Count <CNT>
  W03_GDSTCDSCRN_GOOD_CD_CNT = 0
  W03_GDSTCDSCRN_GOOD_NM_CNT = 0
  W03_GDSTCDSCRN_STCD_LV_CNT = 0
  W03_GDSTCDSCRN_INVNTRY_CNT = 0
  W03_GDSTCDSCRN_PF1_KEY_CNT = 0
  W03_GDSTCDSCRN_PF3_KEY_CNT = 0
  W03_GDSTCDSCRN_MSG_CD_CNT = 0
  W03_GDSTCDSCRN_MSG_TX_CNT = 0
  W03_GDLISTSCRN_GOOD_CD_CNT = 0
  W03_GDLISTSCRN_GOOD_NM_CNT = 0
```

```
 W03_GDLISTSCRN_PF1_KEY_CNT = 0
 W03_GDLISTSCRN_PF3_KEY_CNT = 0
 W03_GDLISTSCRN_MSG_CD_CNT = 0
 W03_GDLISTSCRN_MSG_TX_CNT = 0
'===== READ-DB Word's Restart Count <CNT>
 W03_GDSTCDSCRN_GOOD_CD_CNT = 0
 W03_GDSTCDSCRN_GOOD_NM_CNT = 0
 W03_GDSTCDSCRN_STCD_LV_CNT = 0
 W03_GDSTCDSCRN_INVNTRY_CNT = 0
 W03_GDLISTSCRN_STCD_LV_CNT = 0
 W03_GDLISTSCRN_INVNTRY_CNT = 0
'===== WITRE-DB Word's Restart Count <CNT>
'===== UPDATE-DB Word's Restart Count <CNT>
'===== Printouts' Word's Restart Count <CNT>
End Sub
'* Activate of W03 Open Command Action Vector (P)
Public Sub P3_POP_PROC()
 Call P3_GDSTCDFILE_OP
 Call P3_GDLISTFILE_OP
EnD Sub
'* Activate of W03 READ Command Action Vector (P)
Public Sub P3_PRD_PROC()
 Call P3_GDSTCDFILE_RD
 Call P3_GDLISTFILE_RD
EnD Sub
'* Activate of W03 Tense Control Vector (Y & L)
```

```
Public Sub P3_YL_PROC()
'Activate of Duplication Vector
 CALL Y3_GDSTCDSCRN_GOOD
 CALL Y3_GDSTCDSCRN_GOOD
 CALL Y3_GDSTCDFILE_STCD
 CALL Y3_GDSTCDFILE_INVNTRY
 CALL Y3_GDSTCDSCRN_PF1_KEY
 CALL Y3_GDSTCDSCRN_PF3_KEY
 CALL Y3_GDSTCDSCRN_MSG_CD
 CALL Y3_GDSTCDSCRN_MSG_TX
 CALL Y3_GDLISTSCRN_GOOD_CD
 CALL Y3_GDLISTSCRN_GOOD_NM
 CALL Y3_GDLISTSCRN_PF1_KEY
 CALL Y3_GDLISTSCRN_PF3_KEY
 CALL Y3_GDLISTSCRN_MSG_CD
 CALL Y3_GDLISTSCRN_MSG_TX
'Activate of Homogeneity Vector
 Do
  W03_RECALL_FLG = False
 CALL L3_GDSTCDFILE_GOOD_CD
 CALL L3_GDSTCDFILE_GOOD_NM
 CALL L3_GDSTCDFILE_STCD_LV
 CALL L3_GDSTCDFILE_INVNTRY
 CALL L3_GDLISTFILE_STCD_LV
 CALL L3_GDLISTFILE_INVNTRY
 CALL L3_GDSTCDSCRN_GOOD_CD
```

```
  CALL L3_GDSTCDSCRN_GOOD_NM
  CALL L3_GDSTCDFILE_STCD_LV
  CALL L3_GDSTCDFILE_INVNTRY
  CALL L3_GDSTCDSCRN_PF1_KEY
  CALL L3_GDSTCDSCRN_PF3_KEY
  CALL L3_GDSTCDSCRN_MSG_CD
  CALL L3_GDSTCDSCRN_MSG_TX
  CALL L3_GDLISTSCRN_GOOD_CD
  CALL L3_GDLISTSCRN_GOOD_NM
  CALL L3_GDLISTSCRN_PF1_KEY
  CALL L3_GDLISTSCRN_PF3_KEY
  CALL L3_GDLISTSCRN_MSG_CD
  CALL L3_GDLISTSCRN_MSG_TX
  Loop Until W03_RECALL_FLG = False
EnD Sub
'* Activate of W03 Work Requirement Action Vector (P)
Public Sub P3_PCH_PROC()
  Call P3_ME_INVNTRY_NG
EnD Sub
'* Activate of W03 WRITE Command Action Vector (P)
Public Sub P3_PWT_PROC()
EnD Sub
'* Activate of W03 CLOSE Command Action Vector (P)
Public Sub P3_PLC_PROC()
  Call P3_GDSTCDFILE_CL
  Call P3_GDLISTFILE_CL
```

```
EnD Sub
'* Activate of W03 Routing Action Vector (P)
Public Sub P3_PRT_PROC()
  Call P3_ ME_RETCHAIN_1
  Call P3_ ME_RETCHAIN_2
  Call P3_ ME_DBLCHAIN_1
  Call P3_ ME_MRCCHAIN_1
EnD Sub
'* Activate of W03 Structural Action Vector (P)
Public Sub P3_PCR_PROC()
  Call P3_ ME_PCLEAR1
EnD Sub
'**************************************************
```

The 'Private Sub P3_W03()' is a series of codes which correspond to the part (5701) of the identifier of the program of the related W03 Pallet Function, and indicates that it has been univocally realized.

Next, the 'P3_INIT_FLG = ""', 'P3_POP_FLG = ""', 'P3_PRD_FLG = ""', 'P3_YL_FLG = ""', 'P3_PCH_FLG = ""', 'P3_PWT_FLG = ""', 'P3_PCL_FLG = ""', 'P3_PRT_FLG = ""', 'P3_PCR_FLG = "" and 'P3_END_FLG = "" are codes which initialize various kinds of the End Conditions. The 'P3_INIT_FLG' is a flag to manage the Initialize Process End Condition in W03 Pallet, the 'P3_POP_FLG' is a flag to manage the End Condition of File Open Command Action Vector, the 'P3_PRD_FLG' is a flag to manage the End Condition of File Reference Command Action Vector, the 'P3_YL_FLG' is a flag to manage the End Condition of Tense Control Vector, the 'P3_PCH_FLG' is a flag to manage the End Condition of Work Requirement Action Vector, the 'P3_PWT_FLG' is a flag to manage the End Condition of File Registration and Update Command Action Vector, the 'P3_PCL_FLG' is a flag to manage the End Condition of File Close Command Action Vector, the 'P3_PRT_FLG' is a flag to manage the End Condition of Routing Action Vector, the 'P3_PCR_FLG' is a flag to manage the End Condition of Structural Action Vector, and the 'P3_END_FLG' is a flag to manage the End Condition of End Condition Judgment Process.

The codes which implement initialization of this kind of the End Condition correspond to the part (5701) of the identifier of the program of the related W03 Pallet Function.

Next, the 'If P3_END_FLG = "1"', 'Or ('P3_INIT_FLG = "1"', 'AnD P3_POP_FLG = "1"', 'AnD P3_PRD_FLG = "1"', 'AnD P3_YL_FLG = "1"', 'AnD P3_PCH_FLG = "1"', 'AnD P3_PWT_FLG = "1"', 'AnD P3_PCL_FLG = "1"', 'AnD P3_PRT_FLG = "1""', 'AnD P3_PCR_FLG = "1"') and 'Then GoTo Main_EnD EnD' are codes which correspond to the 'End Condition' (5703).

That is, among various kinds of the End Conditions of W03 Pallet, it examines on whether the flag (P3_END_FLG) to manage the End Condition of the End Condition Judgment Process has been already set or whether all flags to manage all the other End Conditions have been already set, and when the check is TRUE, the process proceeds to 'W03 Pallet Function End' (5705).

Next, although not indicated clearly in Fig. 57, the 'If P3_INIT_FLG = ""', 'AnD P3_POP_FLG = ""', 'P3_PRD_FLG = ""', 'P3_YL_FLG = ""', 'P3_PCH_FLG = ""', 'P3_PWT_FLG = ""', 'P3_PCL_FLG = ""', 'P3_PRT_FLG = ""', 'P3_PCR_FLG = "" and 'Then Call P3_INIT_PROC', 'P3_INIT_FLG = "1" GoTo Main_Chk EnD If' is a logic to proceed to execute Initialize Process in W03 Pallet, when the condition check of executing initialization in W03 Pallet and the checking result are TRUE.

That is, it checks on whether all flags to manage various End Conditions with W03 Pallet have not been set, and when the check result is TRUE, it proceeds to execute Initialize Process in W03 Pallet (Call P3_INIT_PROC), and it sets a flag (P3_INIT_FLG) to manage the Initialize Process End Condition with W03 Pallet (P3_INIT_FLG = "1") after executing the initialization, then returns to the forefront (GoTo Main_Chk).

Next, the 'If P3_INIT_FLG = "1"', 'AnD P3_POP_FLG = ""', 'P3_PRD_FLG = ""', 'P3_YL_FLG = ""', 'P3_PCH_FLG = ""', 'P3_PWT_FLG = ""', 'P3_PCL_FLG = ""', 'P3_PRT_FLG = ""', 'P3_PCR_FLG = ""' and 'Then Call P3_POP_PROC', 'P3_POP_FLG = "1" GoTo Main_Chk EnD If' is are codes which correspond to the part limited to the File Open Action Vector of the '(READ-family) Command Action Vector Activate Condition' (5707), '(READ-family) Command Action Vector Activate' (5709), 'Action Vector End Flag Set' (5711) and 'To End Condition' (5713).

That is, it is a logic to check on whether the flag (P3_INIT_FLG) to manage Initialize Process End Condition in W03 Pallet has been set as well as whether flags to manage the other End Conditions have not been set (5707), and when the check result is TRUE, the process proceeds to 'File Open Command Action Vector' of W03 Pallet (Call P3_POP_PROC). After ending the process of the 'File Open Command Action Vector Activate', it sets a flag to manage the End Condition of W03 Pallet's File Open Command Action Vector (P3_POP_FLG = "1"), thereby returning to the forefront (GoTo Main_Chk) (5713).

Next, the 'If P3_INIT_FLG = "1"', 'AnD P3_POP_FLG = "1"', 'P3_PRD_FLG = ""', 'P3_YL_FLG = ""', 'P3_PCH_FLG = ""', 'P3_PWT_FLG = ""', 'P3_PCL_FLG = ""', 'P3_PRT_FLG = ""', 'P3_PCR_FLG = ""' and 'Then Call P3_POP_PROC P3_PRD_FLG = "1" GoTo Main_Chk EnD If' is are codes which correspond to the part limited to the File Reference Action Vector of the '(READ-family) Command Action Vector Activate Condition' (5707), '(READ-family) Command Action Vector Activate' (5709), 'Action Vector End Flag Set' (5711) and 'To End Condition' (5713).

That is, it is a logic to check on whether the flag (P3_INIT_FLG) to manage Initialize Process End Condition in W03 Pallet and the flag to manage End Condition of the W03 Pallet's File Open Command Action Vector (P3_POP_FLG) have already been set as well as on whether flags to manage other End Conditions have not been set (5707), and when the checking result is TRUE, the process proceeds to 'File Reference Directive Action Vector Activate' of W03 Pallet (Call P3_PRD_PROC). After ending the process of the 'File Reference Command Action Vector', it sets a flag to manage the End Condition of W03 Pallet's File Reference Command Action Vector (P3_PRD_FLG = "1"), thereby returning to the forefront (GoTo Main_Chk) (5713).

Next, the 'If P3_INIT_FLG = "1"', 'AnD P3_POP_FLG = "1"', 'P3_PRD_FLG = "1"', 'P3_YL_FLG = ""', 'P3_PCH_FLG = ""', 'P3_PWT_FLG = ""', 'P3_PCL_FLG = ""', 'P3_PRT_FLG = ""', 'P3_PCR_FLG = ""' and 'Then Call P3_YL_PROC P3_PYL_FLG = "1" GoTo Main_Chk EnD If' is are codes which correspond to the 'Tense Control Vector Activate Condition' (5717), 'Tense Control Vector Activate' (5719), 'Tense Control Vector End Flag Set' (5723) and 'To End Condition' (5725).

That is, it is a logic to check on whether the flag (P3_INIT_FLG) to manage Initialize Process End Condition with W03 Pallet, the flag (P3_POP_FLG) to manage End Condition of the W03 Pallet's File Open Command Action Vector and the flag (P3_PRD_FLG) to manage End Condition of the W03 Pallet's File Reference Command Action Vector have already been set as well as whether flags to manage other End Conditions have not been set (5717), and when the checking result is TRUE, the process proceeds to 'Tense Control Vector Activate' of W03 Pallet (Call P3_YL_PROC). After ending the process of the W03 Pallet's Tense Control Vector, it sets a flag to manage the End Condition of W03 Pallet's Tense Control Vector (P3_YL_FLG = "1"), thereby returning to the forefront (GoTo Main_Chk) (5725).

Next, the 'If P3_INIT_FLG = "1"', 'AnD P3_POP_FLG = "1"', 'P3_PRD_FLG = "1"', 'P3_YL_FLG = "1"', 'P3_PCH_FLG = ""', 'P3_PWT_FLG = ""', 'P3_PCL_FLG = ""', 'P3_PRT_FLG = ""', 'P3_PCR_FLG = ""' and 'Then Call P3_PCH_PROC P3_PCH_FLG = "1" GoTo Main_Chk EnD If' are code columns which correspond to the part limited to the Work Requirement Action Vector of the '(non-READ-family Command) Action Vector Activate Condition' (5731), '(non-READ-family Command) Action Vector Activate' (5729), 'Action Vector End Flag Set' (5733) and 'To End Condition' (5735).

That is, it is a logic to check on whether the flag (P3_INIT_FLG) to manage Initialize Process End Condition in W03 Pallet, the flag (P3_POP_FLG) to manage End Condition of the W03 Pallet's File Open Command Action Vector, the flag (P3_PRD_FLG) to manage End Condition of the W03 Pallet's File Reference Command Action Vector and the flag (P3_YL_FLG) to manage End Condition of W03 Pallet's Tense Control Vector have already been set as well as on whether flags to manage the other End Conditions have not been set (5717), and when the checking result is TRUE, the process proceeds to 'Work Requirement Action Vector Activate' of W03 Pallet (Call P3_PCH_PROC). After ending the process of the W03 Pallet's Work Requirement Action Vector, it sets a flag to manage the End Condition of W03 Pallet's Work Requirement Action Vector (P3_PCH_FLG = "1"), thereby returning to the forefront (GoTo Main_Chk) (5735).

Next, the 'If P3_INIT_FLG = "1"', 'AnD P3_POP_FLG = "1"', 'P3_PRD_FLG = "1"', 'P3_YL_FLG = "1"', 'P3_PCH_FLG = "1"', 'P3_PWT_FLG = ""', 'P3_PCL_FLG = ""', 'P3_PRT_FLG = ""', 'P3_PCR_FLG = ""' and 'Then Call P3_PCH_PROC P3_PCH_FLG = "1" GoTo Main_Chk EnD If' are codes which correspond to the part limited to the Work Requirement Action Vector of the '(non-READ-family Command) Action Vector Activate Condition' (5731), '(non-READ-family Command) Action Vector Activate' (5729), 'Action Vector End Flag Set' (5733) and 'To End Condition' (5735).

That is, it is a logic to check on whether the flag (P3_INIT_FLG) to manage Initialize Process End Condition in W03 Pallet, the flag (P3_POP_FLG) to manage End Condition of the W03 Pallet's File Open Command Action Vector, the flag (P3_PRD_FLG) to manage End Condition of the W03 Pallet's File Reference Command Action Vector, the flag (P3_YL_FLG) to manage End Condition of W03 Pallet's Tense Control Vector and the flag (P3_PCH_FLG) to manage End Condition of Work Requirement Action Vector in W03 Pallet have already been set as well as on whether flags to manage the other End Conditions have not been set, and when the checking result is TRUE, the process proceeds to 'File Registration and Update Action Vector Activate' of W03 Pallet (Call P3_PCH_PROC). After ending the process of the W03 Pallet's File Registration and Update Action Vector, it sets a flag (P3_PWT_FLG = "1") to manage the End Condition of W03 Pallet's Work Requirement Action Vector, thereby returning to the forefront (GoTo Main_Chk) (5735).

Next, the 'If P3_INIT_FLG = "1"', 'AnD P3_POP_FLG = "1"', 'P3_PRD_FLG = "1"', 'P3_YL_FLG = "1"', 'P3_PCH_FLG = "1"', 'P3_PWT_FLG = "1"', 'P3_PCL_FLG = ""', 'P3_PRT_FLG = ""', 'P3_PCR_FLG = ""' and 'Then Call P3_PCH_PROC P3_PCH_FLG = "1" GoTo Main_Chk EnD If' are codes which correspond to the part limited to the File Close Action Vector of the '(non-READ-family Command) Action Vector Activate Condition' (5731), '(non-READ-family Command) Action Vector Activate' (5729), 'Action Vector End Flag Set' (5733) and 'To End Condition' (5735).

That is, it is a logic to check on whether the flag (P3_INIT_FLG) to manage Initialize Process End Condition in W03 Pallet, the flag (P3_POP_FLG) to manage End Condition of the W03 Pallet's File Open Command Action Vector, the flag (P3_PRD_FLG) to manage End Condition of the W03 Pallet's File Reference Command Action Vector, the flag (P3_YL_FLG) to manage End Condition of W03 Pallet's Tense Control Vector, the flag (P3_PCH_FLG) to manage End Condition of Work Requirement Action Vector in W03 Pallet and the flag (P3_PWT_FLG) to manage End Condition of File Registration and Update Action Vector in W03 Pallet have already been set as well as on whether flags to manage the other End Conditions have not been set, and when the check result is TRUE, the process proceeds to 'File Close Action Vector Activate' of W03 Pallet (Call P3_PCL_PROC). After ending the process of the W03 Pallet's File Close Action Vector, it sets a flag to manage the End Condition of W03 Pallet's File Close Action Vector (P3_PCL_FLG = "1"), thereby returning to the forefront (GoTo Main_Chk) (5735).

Next, the 'If P3_INIT_FLG = "1"', 'AnD P3_POP_FLG = "1"', 'P3_PRD_FLG = "1"', 'P3_YL_FLG = "1"', 'P3_PCH_FLG = "1"', 'P3_PWT_FLG = "1"', 'P3_PCL_FLG = ""', 'P3_PRT_FLG = ""', 'P3_PCR_FLG = "1"' and 'Then Call P3_PCH_PROC P3_PCH_FLG = "1" GoTo Main_Chk EnD If' are codes which correspond to the part limited to the Routing Action Vector of the '(non-READ-family Command) Action Vector Activate Condition' (5731), '(non-READ-family Command) Action Vector Activate' (5729), 'Action Vector End Flag Set' (5733) and 'To End Condition' (5735).

That is, it is a logic to check on whether the flag (P3_INIT_FLG) to manage Initialize Process End Condition in W03 Pallet, the flag (P3_POP_FLG) to manage End Condition of the W03 Pallet's File Open Command Action, the flag (P3_PRD_FLG) to manage End Condition of the W03 Pallet's File Reference Command Action Vector, the flag (P3_YL_FLG) to manage End Condition of W03 Pallet's Tense Control Vector, the flag (P3_PCH_FLG) to manage End Condition of Work Requirement Action Vector in W03 Pallet and the flag (P3_PWT_FLG) to manage End Condition of File Registration and Update Action Vector in W03 Pallet and the flag (P3_PCL_FLG) to manage End Condition of File Close Action Vector in W03 Pallet have already been set as well as whether flags to manage the other End Conditions have not been set, and when the checking result is TRUE, the process proceeds to 'Routing Action Vector Activate' of W03 Pallet (Call P3_PRT_PROC). After ending the process of the W03 Pallet's Routing Action Vector, it sets a flag to manage the End Condition of W03 Pallet's Routing Action Vector (P3_PRT_FLG = "1"), thereby returning to the forefront (GoTo Main_Chk) (5735).

Next, the 'If P3_INIT_FLG = "1"', 'AnD P3_POP_FLG = "1"', 'P3_PRD_FLG = "1"', 'P3_YL_FLG = "1"', 'P3_PCH_FLG = "1"', 'P3_PWT_FLG = "1"', 'P3_PCL_FLG = ""', 'P3_PRT_FLG = "1"', 'P3_PCR_FLG = "1"' and 'Then Call P3_PCH_PROC P3_PCH_FLG = "1" GoTo Main_Chk EnD If' are codes which correspond to the part limited to the Structural Adjustment Action Vector of the '(non-READ-family Command) Action Vector Activate Condition' (5731), '(non-READ-family Command) Action Vector Activate' (5729), 'Action Vector End Flag Set' (5733) and 'To End Condition' (5735).

That is, it is a logic to check on whether the flag (P3_INIT_FLG) to manage Initialize Process End Condition in W03 Pallet, the flag (P3_POP_FLG) to manage End Condition of the W03 Pallet's File Open Command Action Vector, the flag (P3_PRD_FLG) to manage End Condition of the W03 Pallet's File Reference Command Action Vector, the flag (P3_YL_FLG) to manage End Condition of W03 Pallet's Tense Control Vector, the flag (P3_PCH_FLG) to manage End Condition of Work Requirement Action Vector in W03 Pallet, the flag (P3_PWT_FLG) to manage End Condition of File Registration and Update Action Vector with W03 Pallet, the flag (P3_PCL_FLG) to manage End Condition of File Close Action Vector in W03 Pallet and the flag (P3_PRT_FLG) to manage End Condition of Route Setting Action Vector with W03 Pallet have already been set as well as whether flags to manage the other End Conditions have not been set, and when the checking result is TRUE, IT SETS End Flag (P3_PEND_FLG ="1"), thereby returning to the forefront (GoTo Main_Chk) (5739).

Next, the 'Public Sub P3_INTI_PROC()' 'WFL_GDSTCDFILE_GOOD_CD = ""'
'WFL_GDSTCDFILE_GOOD_NM = ""' 'WFL_GDSTCDFILE_STCD_LV = ""'
'WFL_GDSTCDFILE_INVNTRY = ""' 'WFL_GDSTCFILE_GOOD_CD = ""'
'WFL_GDLISTFILE_GOOD_NM = ""'
'W03_GDSTCDSCRN_GOOD_CD_CNT = 0'
'W03_GDSTCDSCRN_GOOD_NM_CNT = 0'
''W03_GDSTCDSCRN_STCD_LV_CNT = 0'
''W03_GDSTCDSCRN_INVNTRY_CNT = 0'
''W03_GDSTCDSCRN_PF1_KEY_CNT = 0'
'W03_GDSTCDSCRN_PF3_KEY_CNT = 0'
'W03_GDSTCDSCRN_MSG_CD_CNT = 0'
'W03_GDSTCDSCRN_MSG_TX_CNT = 0'
'W03_GDLISTSCRN_GOOD_CD_CNT = 0'
'W03_GDLISTSCRN_GOOD_NM_CNT = 0'
'W03_GDLISTSCRN_PF1_KEY_CNT = 0'
'W03_GDLISTSCRN_PF3_KEY_CNT = 0'
'W03_GDLISTSCRN_MSG_CD_CNT = 0'
'W03_GDLISTSCRN_MSG_TX_CNT = 0' 'W03_GDSTCDFILE_GOOD_CD _CNT = 0'
'W03_GDSTCDFILE_GOOD_NM_CNT = 0'
'W03_GDSTCDFILE_STCD_LV_CNT = 0'
'W03_GDSTCDFILE_INVNTRY_CNT = 0'
'W03_GDLISTFILE_STCD_LV_CNT = 0'
'W03_GDLISTFILE_INVNTRY_CNT = 0' ==== WRITE-DB Word Restart Count <CNT> EnD Sub
is a program of Initialize Process in W03 Pallet. The 'Public Sub P3_INTI_PROC()' is a series of codes which correspond to the part of the identifier of the Initialize Process program.

Also, the 'WFL_GDSTCFILE_GOOD_CD = ""' or 'WFL_GDLISTFILE_GOOD _NM = ""' is a logic to initialize buffer area on the main memory which refers to and takes in the data code on File.

Also, the 'W03_GDSTCDSCRN_GOOD_CD_CNT' or 'W03_GDLISTFILE_ INVNTRY_CNT'' is a logic to initialize Restart Counter which is processed by Tense Control Vector mounted on W03 Pallet.

Next, the 'Public Sub P3_POP_PROC() Call P3_GDSTCDFILE_OP Call P3_GDLISTFILE_OP EnD Sub' is a program logic which corresponds to the detailed part of File Open Action Vector Activate. The 'Public Sub P3_POP_PROC()' is a series of codes which correspond to the part of the identifier of the File Open Action Vector Activate program.

Also, the 'Call P3_GDSTCDFILE_OP' activates File Open Action Vector of GDSTCDFILE, and 'Call P3_GDLISTFILE_OP' activates File Open Action Vector of GDLISTFILE. They have been determined with a single meaning from the Word Table.

Next, the 'Public Sub P3_PRD_PROC()', 'Call P3_GDSTCDFILE_RD' and 'Call P3_CDLISTFILE_RD EnD Sub' is a program logic which corresponds to the detailed part of File Reference Action Vector Activate. The 'Public Sub P3_PRD_PROC()' is a series of codes which correspond to the part of the identifier of the File Reference Action Vector Activate program.

Also, the 'Call P3_GDSTCDFILE_RD' activates File Reference Action Vector of GDLISTFILE, and it has univocally been determined from the Word Table.

Next, the 'Public Sub P3_YL_PROC()', 'CALL Y3_GDSTCDSCRN_GOOD' 'CALL Y3_GDSTCDSCRN_GOOD' 'CALL Y3_GDSTCDFILE_STCD' 'CALL Y3_GDSTCDFILE_INVNTRY' 'CALL Y3_GDSTCDSCRN_PF1_KEY' 'CALL Y3_GDSTCDSCRN_PF3_KEY' 'CALL Y3_GDSTCDSCRN_MSG_CD' 'CALL Y3_GDSTCDSCRN_MSG_TX' 'CALL Y3_GDLISTSCRN_GOOD_CD' 'CALL Y3_GDLISTSCRN_GOOD_NM' 'CALL Y3_GDLISTSCRN_PF1_KEY' 'CALL Y3_GDLISTSCRN_PF3_KEY' 'CALL Y3_GDLISTSCRN_MSG_CD' 'CALL Y3_GDLISTSCRN_MSG_TX' 'Do W03_RECALL_FLG = False' 'CALL L3_GDSTCDFILE_GOOD_CD' 'CALL L3_GDSTCDFILE_GOOD_NM' 'CALL L3_GDSTCDFILE_STCD_LV' 'CALL L3_GDSTCDFILE_INVNTRY' 'CALL L3_GDLISTFILE_STCD_LV' 'CALL L3_GDLISTFILE_INVNTRY' 'CALL L3_GDSTCDSCRN_GOOD_CD' 'CALL L3_GDSTCDSCRN_GOOD_NM' 'CALL L3_GDSTCDFILE_STCD_LV' 'CALL L3_GDSTCDFILE_INVNTRY' 'CALL L3_GDSTCDSCRN_PF1_KEY' 'CALL L3_GDSTCDSCRN_PF3_KEY' 'CALL L3_GDSTCDSCRN_MSG_CD' 'CALL L3_GDSTCDSCRN_MSG_TX' 'CALL L3_GDLISTSCRN_GOOD_CD 'CALL L3_GDLISTSCRN_GOOD_NM' 'CALL L3_GDLISTSCRN_PF1_KEY' 'CALL L3_GDLISTSCRN_PF3_KEY' 'CALL L3_GDLISTSCRN_MSG_CD' 'CALL L3_GDLISTSCRN_MSG_TX' 'Loop Until W03_RECALL_FLG = False EnD Sub' is a program logic which corresponds to the detailed part of 'Tense Control Vector Activate' (5717) as well as the part of 'Restart Flag Set Done' (5721).

That is, it is a logic which first activates all Duplication Vectors mounted on W03 Pallet with no relationship of their order, then resets (W03_RECALL_FLG = False) Restart Flag in advance before activating each Homogeneity Vector upon each repetitive process, and activates all Homogeneity Vectors mounted on W03 Pallet with no relational order until the Restart Flag is reset thereafter (Until W03_RECALL_FLG = False). It indicates that it has been realized by substituting identifiers defined in the W03 Pallet Word Table of Fig. 69.

Next, the 'Public Sub P3_PCH_PROC() Call P3__ME_INVNTRY_NG EnD Sub' is a program logic which corresponds to the detailed part of the Work Requirement Action Vector Activate. The 'Public Sub P3_PCH_PROC()' is a series of codes which correspond to the part of the identifier of the Work Requirement Action Vector Activate program.

Also, the 'Call P3__ME_INVNTRY_NG' is Work Requirement Action Vector Activate of INVNTRY_NG, and it has been univocally determined from the Word Table.

Next, the 'Public Sub P3_PWT_PROC() EnD Sub' is a program logic which corresponds to the detailed part of the File Registration and Update Action Vector Activate.

The 'Public Sub P3_PWT_PROC()' is a series of codes which correspond to the part of the identifier of the File Registration and Update Action Vector Activate program.

To be noted, in this system, File Registration and Update Action Vectors do not exit actually, but such codes are prepared in advance so as to comply with the addition and modification of system in future.

Next, the 'Public Sub P3_PCL_PROC() Call P3_GDSTCDFILE_CL Call P3_GDLISTFILE_CL EnD Sub' is a program logic which corresponds to the detailed part of the File Close Action Vector Activate. The 'Public Sub P3_PCL_PROC()' is a series of codes which correspond to the part of the identifier of the Work Requirement Action Vector Activate program.

Also, the 'Call P3_GDSTCDFILE_CL' is File Close Action Vector Activate of GDSTCDFILE, and the 'Call P3_GDLISTFILE_CL' is File Close Action Vector Activate of GDLISTFILE, and they have been univocally determined from the Word Table.

Next, the 'Public Sub P3_PRT_PROC()' 'Call P3_RETCHAIN_1' 'Call P3_ME_RETCHAIN_2' 'Call P3_ME_DBLCHAIN_1' 'Call P3_ME_MRCCHAIN_1 EnD Sub' is a program logic which corresponds to the detailed part of the Routing Action Vector Activate. The 'Public Sub P3_PRT_PROC()' is a series of codes which correspond to the part of the identifier of the Routing Action Vector Activate program.

Also, the 'Call P3_ME_RETCHAIN_1' is RETCHAIN_1 Routing Action Vector Activate, and the 'Call P3_ME_RETCHAIN_2' is RETCHAIN_2 Routing Action Vector Activate, and the 'Call P3_ME_DBLCHAIN_1' is DBLCHAIN_1 Routing Action Vector Activate, and the 'Call P3_ME_MRCCHAIN_1' is DBLCHAIN_1 Routing Action Vector Activate, and they have been univocally determined from the Word Table.

Next, the 'Public Sub P3_PCR_PROC()' 'Call P3_ME_PCLEAR1 EnD Sub' is a program logic which correspond to the detailed part of the Structural Adjustment Action Vector Activate. The 'Public Sub P3_PCR_PROC()' is a series of codes which corresponds to the part of the identifier of the Structural Adjustment Action Vector Activate program.

Also, the 'Call P3_ME_PCLEAR1' is PCLEAR1 Structural Adjustment Action Vector Activate, and it has been univocally determined from the Word Table.

<<W04 Pallet Function>>

*The W04 Pallet Function is a program which is realized as codes so as to reduce the following into the computer space: Convergent Dense Structure 1401 to materialize Equivalent Unit-Link 1419 and Convergent Rule to construct it, and Logical Structures of the 4th and 5th Contingent Rules to be established in it.*

As already explained, Fig 59 is a functional block diagram for explaining the method of creating the W04 Pallet's Pallet Function, in which unit programs (Homogeneity Vector) of individual Word Identifiers and unit programs (Action Vector and Homogeneity Vector) of respective Action Operators, belonging to W04 Pallet, can be arranged with no relationship of process sequence.

As shown by the same Fig., in Pallet Function belonging to W04 Pallet, the examination is implemented on whether the End Conditions are satisfied or not (specifically, whether the Tense Control Vector End Flag, the Message-related Action Vector End Flag and the End Flag are set to "1" or not) (step 5903), and when the End Conditions are satisfied, the process returns to Pallet Chain Function by 'W04 Pallet's End' (step 5905).

When the End Conditions are not satisfied, the examination on whether the Tense Control Vector Activate Condition is satisfied or not (specifically, whether the Tense Control Vector End "1" or not) is implemented in the 'Tense Control Vector Activate Condition' judgment box (step 5907), and, when the Tense Control Vector Activate Condition is satisfied, a group of the Tense Control Vector-related unit programs are activated in the 'Tense Control Vector Activate' process box (step 5909).

*With the activated Tense Control Vector-related unit program group, unit programs of every Word Identifier (Duplication Vector and Homogeneity Vector) are arranged without the necessity of considering process sequence.*

Next, upon returning from the Tense Control Vector-related unit program group, the logic implements judgment if Restart is required in the 'Restart Flag Set Done' judgment box (step 5911), and on whether Restart is required, it reactivates (5912) the Tense Control Vector-related unit program group. If Restart is not required, the logic to set the Tense Control Vector End Flag to "1" is implemented in 'Tense Control Vector End Flag Set' (step 5913), and thereafter End or not (specifically, if the Tense Control Vector End Flag, Message-related Action Vector End Flag and End Flag are "1" or not) is judged in the 'End' judgment box (step 5915). When the End Condition is not satisfied (5916), the process returns to the forefront of the Pallet Function. And when the End Condition is satisfied (5715), it returns to the forefront of the Pallet Function after setting the End flag in the 'End Flag Set' process box (step 5917) for assurance.

When the Tense Control Vector Activate Condition is not satisfied, the check on whether the (Message-related) Command Action Vector Activate Condition is satisfied or not (specifically, whether the Tense Control Vector End Flag is jointly "1" and whether the (Message-related) Command Action Vector End Flag is "1" or not) is implemented in the '(Message-related) Command Action Vector Activate Condition' judgment box (step 5919), and when the (Message-related) Command Action Vector Activate Condition is satisfied, the (Message-related) Command Action Vector's unit program group is activated in the '(Message-related) Command Action Vector Activate' process box (step 5912).

In the activated '(Message-related) Command Action Vector's unit program group, unit programs of every Action Operator (Message File Open Command Vector, Work Requirement Action Vector to determine the message number concerned with File-related words and Action Vectors which are placed on W03 Pallet, Message File Reference Command Action Vector, Message Edit Work Requirement and Message File Close Command Action Command) are arranged without the necessity of considering process sequence.

Next, upon returning from the (Message-related) Command Action Vector's unit program group, the logic to set the (Message-related) Command Action Vector End Flag to "1" is implemented in the '(Message-related) Command Action Vector End Flag Set' process box (step 5923), and thereafter End or not (specifically, if the Tense Control Vector End Flag, (Message-related) Command Action Vector End Flag and End Flag are "1" or not) is judged in the 'End' judgment box (step 5925). When the End Condition is not satisfied (5926), the process returns to the forefront of the Pallet Function. And when the End Condition is satisfied, it returns to the forefront of the Pallet Function after setting the End flag in the 'End Flag Set' process box (step 5927) for assurance.

*Mentioned next (from asterisk to asterisk) shows the result of coding Pallet Function into codes in the aforementioned method by Visual Basic, which is mounted on W04 Pallet concerned in, for example, the name of <Product-wise Inventory Status Grasping Screen> and Definitive Identifier of <GDSTCDSCRN>.*

```
'***********************************************************
Public Sub Lyee2W04()
'<Control Flag Initialize>·····*
 P4_INIT_FLG = ""
 P4_YL_FLG = ""
 P4_PCH_FLG = ""
 P4_PRT_FLG = ""
 P4_PCR_FLG = ""
 P4_END_FLG = ""
'<Control>·····*
Main_Chk:
'··· End Judgment ···
 If P4_END_FLG = "1" _
  Or (P4_INIT_FLG = "1" _
  AnD P4_YL_FLG = "1" _
  AnD P4_PCH_FLG = "1" _
  AnD P4_PRT_FLG = "1" _
  AnD P4_PCR_FLG = "1" ) Then
     GoTo Main_EnD
 EnD If
```

```
'··· ϕp·P Group (Initial Process) ···
 If P4_INIT_FLG = "" _
  AnD P4_YL_FLG = "" _
  AnD P4_PCH_FLG = "" _
  AnD P4_PRT_FLG = "" _
  AnD P4_PCR_FLG = "" Then
'·········< Initialize Setting Group Activate
     Call P4_INIT_PROC
'·········< Execute Done
     P4_INIT_FLG = "1"
     GoTo Main_Chk
 EnD If
'··· YL Group ···
 If P4_INIT_FLG = "1"
  AnD P4_YL_FLG = ""
  AnD P4_PCH_FLG = ""
  AnD P4_PRT_FLG = ""
  AnD P4_PCR_FLG = "" Then
'·········< Homogeneity Vector Group Activate
     Call P4_YL_PROC
'·········< Execute Done
     P4_YL_FLG = "1"
     GoTo Main_Chk
 EnD If
'··· Work Requirement Action Vector Group ···
 If P4_INIT_FLG = "1" _
```

```
AnD P4_YL_FLG = "1" _
AnD P4_PCH_FLG = "" _
AnD P4_PRT_FLG = "" _
AnD P4_PCR_FLG = "" Then
'---------< Work Requirement Action Vector Group Activate
     Call P4_PCH_PROC
'---------< Execute Done
     P4_PCH_FLG = "1"
     GoTo Main_Chk
 EnD If
'--- Routing Action Vector Group ---
 If P4_INIT_FLG = "1" _
  AnD P4_YL_FLG = "1" _
  AnD P4_PCH_FLG = "1" _
  AnD P4_PRT_FLG = "" Then
'---------< Routing Action Vector Group Activate
     Call P4_PRT_PROC
'---------< Execute Done
     P4_PRT_FLG = "1"
     GoTo Main_Chk
 EnD If
'--- Structural Adjustment Action Vector Group ---
 If P4_INIT_FLG = "1" _
  AnD P4_YL_FLG = "1" _
  AnD P4_PCH_FLG = "1" _
  AnD P4_PRT_FLG = "1" _
```

```
   AnD P4_PCR_FLG = "" Then
'---------< Structural Adjustment Action Vector Group Activate
       Call P4_PCR_PROC
'---------< Execute Done
       P4_PCR_FLG = "1"
       GoTo Main_Chk
  EnD If
'--- All Ends' Check ---
  If P4_INIT_FLG = "1" _
   AnD P4_YL_FLG = "1" _
   AnD P4_PCH_FLG = "1" _
   AnD P4_PRT_FLG = "1" _
   AnD P4_PCR_FLG = "1" Then
'---------< End Done
       P4_END_FLG = "1"
       GoTo Main_Chk
  EnD If
Main_EnD
EnD Sub
'* W04 Initial Process Group
Public Sub P4_INIT_PROC()
'=== Action Vector-Execute Done Flag
  W04_ME_PRT1_FLG = ""
  W04_ME_PCR1_FLG = ""
'=== Action Vector-Refusal Flag <Non>
  W04_ME_PRT1_Non = False
```

```
 W04_ME_PCR1_Non = False
EnD Sub
'* W04 Tense Control Vector (Y&L) Activate
Public Sub P4_YL_PROC()
'Duplication Vector Activate
 CALL Y4_GDSTCDSCRN_GOOD_CD
 CALL Y4_GDSTCDSCRN_GOOD_NM
 CALL Y4_GDSTCDFILE_STCD_LV
 CALL Y4_GDSTCDFILE_INVNTRY
 CALL Y4_GDSTCDSCRN_PF1_KEY
 CALL Y4_GDSTCDSCRN_PF3_KEY
 CALL Y4_GDSTCDSCRN_MSG_CD
 CALL Y4_GDSTCDSCRN_MSG_TX
'Homogeneity Vector Activate
 CALL Y4_GDSTCDSCRN_GOOD_CD
 CALL Y4_GDSTCDSCRN_GOOD_NM
 CALL Y4_GDSTCDFILE_STCD_LV
 CALL Y4_GDSTCDFILE_INVNTRY
 CALL Y4_GDSTCDSCRN_PF1_KEY
 CALL Y4_GDSTCDSCRN_PF3_KEY
 CALL Y4_GDSTCDSCRN_MSG_CD
 CALL Y4_GDSTCDSCRN_MSG_TX
EnD Sub
'* W04 Work Requirement Action Vector (P) Activate
Public Sub P4_PCH_PROC()
 CALL Y4_MSGFL_OP
```

```
  CALL Y4_FMSGCDDC
  CALL Y4_MSGFL_RD
  CALL Y4_MSGTX_ED
EnD Sub
'******************************************
'* W04 Routing Action Vector (P) Activate
'******************************************
Public Sub P4_PRT_PROC()
  CALL Y4_GDSTCDSCRNRT
EnD Sub
'******************************************
' * W04 Routing Action Vector (P) Activate
' ******************************************
Public Sub P4_PCR_PROC()
  CALL Y4_PCLEAR1
  CALL Y4_PCLEAR1
EnD Sub
' ************************************************************
```

<Creation of Pallet Chain Function (step 6411)>

The Pallet Chain Function is a program composed of a series of codes which establishes synchronization by means of the function of data Send/Receive with the Activate control functions of the created Pallet and the medium of Screen. It is a program realized in codes so as to reduce the logical structure of the Idea Rule in the Providence of Existence into the computer space and only one Pallet Chain Function is created in system in accordance with the various points of the logical structure of the principle theoretical base.

Fig. 32 is, as already aforementioned, a flowchart to show the logical structure of the Pallet Chain Function.

As shown in this Fig., the part of Program Identifier Φ0 (3201) is a series of codes of the forefront of the program composed of a series of codes of Pallet Chain Function Φ0 of the Scenario Function T0 with medium of Screen as Base Definitive. For example, explained below is a case where it is programmed into codes in the programming language 'Visual Basic' (abbreviated as VB) under the control of the OS 'MS-DOS' .

Fig. 91 is a diagram for explaining the example of the part of Pallet Chain Function Activate.

First, it is registered to the OS 'MS-DOS' , and by clicking 'Short-cut' (9102) of the related system with mouse, the start of system operation is directed and activated. Then, the codes (9103) of the forefront 'Private Sub Main' of the Pallet Chain Function Φ0 starts to operate by the codes 'Call Sub Main' (9101) which was defined in VB product 9105.

In the 'Private Sub Main' (9103) which started to operate, an initial value is set to the Send information at first, which is to be sent to Screen just after the start of system. That is, the contents of the data field (PltID_Entry) in which the Send Information to be is sent to Screen just after the start of system in recorded is substituted into the data field (CTRL.NxtPltID) which determines the Send Information. To be noted, the Send Information which is to be sent to Screen just after the start of system is 'Menu,' normally.

Next, an initial value is set to the judgment information of Scenario Chain Yes/No (9107). That is, data code ( "1" ) meaning no-need of Scenario Chain is substituted into the data field (CTRL.Continue) which determines the judgment information of Scenario Chain Yes/No.

**[1675]** Next, the original logical part 9112 of Chain Function 9111 starts to operate 9119 and implements at first 'Send Information Determine' (step 3203). The Send Information to be determined is semantic quality concerned with Consciousness Unit-Link in the Providence of Existence, and when it is reduced into the computer space it becomes Media Identifier with a data code displayed next on Screen and W04 Pallet Identifier concerned with it.

That is, in 'Send Information Determine' (step 3203), the process is realized by the following procedue: If data (If CTRL.NxtScrnID <> "" Then) exists in the data field (CTRL.NxtScrnID) that records the next-to-send Screen Identifier (9113), the contents of the data field (CTRL.CurScrnID) that records Screen Identifier with an indication of 'currently sending' is substituted (9115) to be kept into the data field (CTRL.PrvScrnID) that records Screen Identifier with an indication of 'sent just before ', then the data field (CTRL.NxtScrnID) that records the next-to-send Screen Identifier is substituted (9117) into the data field (CTRL.CurScrnID) that records the Screen Identifier with an indication of 'currently sending'

Thereafter, the Screen determined in this manner is sent (Call NextScreenShow) (9121). In the determination of this Send Information, the data field that records the next-to-send Screen Identifier is cleared as the afterwards process (CTRL.NxtScrnID = "" ( (9119).

The next Screen Identifier is set together with the Next Activate Pallet Identifier and 'Scenario Chain Yes/No' by the Routing Action Vector which is mounted on W04 Pallet, the 'Send Function' (step 3221) operates only after the operation of W04 Pallet, when viewed from the execution standpoint.

Next, the ' System Blockade ' examination (step 3205) is implemented. That is, the contents of the data field (CTRL.NxtPltID) that records the Next Activate Pallet Identifier is checked, and if its contents is 'System Blockade (EnD)' the system blockade (step 3207) is implemented. Listed in the following (from asterisk to asterisk) is what this content was coded into

```
' ******************************************
' ··· System Blockade
If CTRL.NxtPltID = " EnD"  Then
       EnD
EnD If
' ******************************************
```

Now, if the contents of the data field that records the Next Activate Pallet Identifier (CTRL.NxtPltID) is not 'System Blockade (EnD)' , the 'Within-WT Continue' examination (step 3209) is implemented. The 'In-WT Continue' check (step 3209) means to check whether to begin in the Providence of Existence, from the new Deuteronomy or not, and in case the Providence of Existence has been reduced into the computer space, it means to check, for example, whether new work and function are selected or not by returning to 'Menu' .

That is, the contents of the data field that records the Next Activate Pallet Identifier (CTRL.NxtPltID) is checked, and if the contents corresponds to the contents of the data field (PltID_Entry) that records the 'Menu Screen Identifier' , the 'In-WT Continue' check (step 3209) is regarded as FALSE and the related 'In-WT All Pallets Set' (step 3211) is implemented.

Further, the related 'In-WT All Pallets Set' means to set Pallets managed by the 'Menu' Screen into a state of assuming semantic quality if needed, thereby realizing a logic dependent on the OS to be applied. Listed in the following (from asterisk to asterisk) is what it was coded into

```
' ******************************************

If CTRL.NxtPltID = PltID_Entry Then

` The corresponding In·WT all Pallets are set

        EnD If

' ******************************************
```

Next, if 'In-WT Continue' (step 3209) is TRUE, the 'Scenario Chain Yes/No' check (step 3213) is implemented. The 'Scenario Chain Yes/No' check is a logic to imitate the Disintegration in the Providence of Existence, and, when the Providence of Existence has been reduced into the computer space, it corresponds to the initialization of the data field to imitate semantic quality's inducement destination.

That is, the contents of the data field (CTRL.Cnro_Cain) that records Scenario Chain Yes/No is checked, and if the contents is No ( "1" ), the initialization step 3217) of the area of all the data fields identified by Word Identifier is implemented. Listed in the following (from asterisk to asterisk) is what it was coded into.

```
' ******************************************

' When Scenario Chain is not required, Word Area is cleared


If = CTRL.Cnro_Cain =  "1"    Then

        Call Area_Clear

        EnD If

' ******************************************
```

Then, if the contents of the data field that records Scenario Chain Yes/No is 'Yes' , the 'Related W04 Pallet Activate' (step 3219) is implemented.

Fig. 92 is an example of the codes of the part of 'Each Pallet Activate' of Pallet Chain Function.

That is, by setting (9203) the contents of the data field that records the next 'Pallet Identifier' into the data field (CTRL. CurPltID) that records the (CTRL.NxtPltID) as current Screen Identifier, 'Pallet Identifier' activated next is determined and the corresponding Pallet is activated (Call PALLETCall) (9207).

Further, before the determination of Pallet activated next, the contents of the data field (CTRL.CurPltID) that records Current Pallet Identifier is copied (9201) for escape into the data field (CTRL.PrvPltID) that records the previous Pallet Identifier, then at the same time, as afterward process of the determination of Pallet Identifier, the data field the (CTRL.NxtPltID) that records the next Pallet Identifier is cleared (step 9205).

The next Pallet Identifier, together with 'Scenario Chain Yes/No' (step 3213), is set into Routing Action Vector which is mounted on each Pallet as well as Homogeneity Vector of the word, Operation Key (or Direction Command), which is mounted on W02 Pallet.

After the end of the 'Corresponding W04 Pallet Activate' (step 3219) (9402, 9404 in Fig. 94), a data code edited in the W04 Pallet is sent to Screen by 'Send Function' (step 3219). That is, by the (Call NextScreenShow) (9121) which is a series of codes in the logic of 'Send Information Determine' (step 3203), it is sent to the medium identified by the 'Screen Identifier' appointed in the Routing Action Vector inside W04 Pallet. By this, it shall be embodied as an existence phenomenon.

Fig. 93 and Fig. 94 are diagrams for explaining the activation of the Pallet of Pallet Chain Function.

Then, a person who has recognized the existence phenomenon (step 3225) intends synchronization, thereby Input Operation (3225) (9302) is implemented. That is, input of data code is implemented into the data field belonging to Screen, and Operation Key (or Direction Command) is pressed down.

That is, by clicking 'Direction Command' of the Screen with mouse, the original logical part of the codes of 'Private Sub T0' of Pallet Chain Function Φ0 directly starts to operate by the codes (9301) of 'Call T0' which was defined in VB product, and the 'Receive Function' (step 3229) is implemented. And, the 'Receive Normal' (step 3229) check is implemented by the codes of '(On Error GoTo TOERROR) (9303). Then, the corresponding 'W02 Pallet Activate' (step 3231) (9401), the W02 Pallet (step 3233) (9403) check and the 'W03 Pallet Activate' (step 3235) (9405) are implemented by the codes shown in Fig. 94.

Herein, a method of maintenance (software architecture control method) is explained.

In information system employed for the practical work of business which operates the developed software, the operational environment condition of the practice varies daily. When the adaptation to the environment condition is required for the software in terms of such variation of the operational environment condition, it is impossible to cope with it with flexibility and promptness for the software developed by the traditional method because it contains, more or less, black-box-like parts in its architecture as well as in its logical structure.

In contrast, in the architecture and logical structure of software based on the present invention, there is no black-box-like part and individual constituents are independent from each other, because the theoretical grounds to determine them is based on the principle points not assuming personal arbitrariness, even 1 (one) statement of the object program composed of a series of codes. Therefore, it is possible to follow up to the environment conditions flexibly and promptly.

The method to enable such a flexible and prompt follow-up to environment conditions is implemented in the following sequence.

(1) Requirements for the application environment condition are grasped by focusing on the variation of the operational environment condition concerned with media such as Screen and Printouts possessing the nature that can be recognized visually and directly (for example, change of data code to be embodied in the data field belonging to media, addition of data field belonging to media, addition of a medium, etc.). And, Definitive Identifiers of medium Screen and Printouts with such variation are specified in accordance with the various points of the aforementioned system development method.
(2) Homogeneity Map concerned with specified Definitive Identifiers is specified. Hereupon, in case of the requirement of adding medium, the work after the change or addition of Homogeneity Map is implemented in accordance with the various points of the aforementioned system development method.
(3) From the Word Table concerned with the specified Homogeneity Map, Word Identifier or Action Operator is specified in accordance with the various points of the aforementioned system development method.
(4) From the specified Word Identifier, Tense Control Vector and Action Vector concerned with the Word Identifier or Action Operator is specified.
(5) The variable condition part ( 'Empty' check or Execute Condition check) of the specified Tense Control Vector or Action Vector and the process logic part (Self Creation part or Execute Process part) are changed as prescribed.
(6) Stand-alone test is implemented.

As explained in 'Various points of Homogeneity Map,' 'Various points of Tense Control Vector' , 'Various points of Pallet Function' , 'Various points of Pallet Chain Function', 'Various points of Action Vector' , 'Various points of Synchronous Data Structure' , and 'Various points of Software Development Method' , with the software structure explained by the present invention, the various points of the logical structure of even up to 1 (one) statement is based on the grounds of principle, by taking Definitive Identifier and Word Identifier (belonging to the medium identified by the Definitive Identifier) as Independent Variables. Also, individual components are independent. Because of such nature, the location to be modified and its contents can be pin-pointed to specify when the follow-up to the variation of the operational environment condition is implemented.

5. Brief Description of the Drawings

Fig. 1 is a conceptual block diagram for explaining the conceptual method of the present invention.
Fig. 2 is a conceptual block diagram for explaining the role of the concept of software.
Fig. 3 is a conceptual block diagram for explaining the concept of the meaning.
Fig. 4 is a conceptual block diagram for explaining the software determination method realized by Lyee, which does not require the interpretation of the meaning.
Fig. 5 is a conceptual block diagram for explaining the concept of an existence phenomenon.
Fig. 6 is a conceptual block diagram for explaining the conceptual l method of grasping invisible existence.

Fig. 7 is a conceptual block diagram for explaining the concept of the stage from materialization to embodiment of semantic quality, which is based on the present invention.
Fig. 8 is a conceptual block diagram for explaining the concept of the Incomprehensible meaning-space.
Fig. 9 is a conceptual block diagram for explaining a law of the seating of Logical Atom in the Idea meaning-space.
Fig. 10 is a conceptual block diagram for explaining the structure established with a law of the seating of Logical Atom 802 in the Idea meaning-space
Fig. 11 is a conceptual block diagram for explaining the concept of Unit-Link.
Fig. 12 is a conceptual block diagram for explaining the corresponding relation of Unit-Link and a program.
Fig. 13 is a conceptual block diagram for explaining a law of the materialization of Unit-Link that is produced from Consciousness Logical Atom, that is, Consciousness Unit-Link.
Fig. 14 is a conceptual block diagram for explaining a law of the materialization of Unit-Link that is produced from Cognitive Logical Atom, that is, Cognitive Unit-Link.
Fig. 15 is a conceptual block diagram for explaining the state of the materialization of Unit-Link by the first Contingent Rule.
Fig. 16 is a conceptual block diagram for explaining the state of the materialization of Unit-Link by the second Contingent Rule.
Fig. 17 is a conceptual block diagram for explaining the theoretical grounds of the materialization of the 'Consciousness Unit-Link in which the Kuh is established.'
Fig. 18 is a conceptual block diagram for explaining the scheme that avoids the Bertrand Russell' s 'Irrationality' .
Fig. 19 is a conceptual block diagram for explaining the process logic has three kinds of α-type (Existence), β-type (Reference) and γ-type (Modification).
Fig. 20 is a conceptual block diagram for explaining the Providence of Existence three-dimensionally.
Fig. 21 is a conceptual block diagram for explaining the method of devising to satisfy the Providence of Existence by using Consciousness Unit-Link as the starting point.
Fig. 22 is a conceptual block diagram to explain the Spatial Simulation.'
Fig. 23 is a conceptual block diagram for explaining the method to establish the law of the Providence of Existence as an algorithm.
Fig. 24 is a conceptual block diagram for explaining the relation between Scenario Function and the Spatial Simulation.
Fig. 25 is a conceptual block diagram for explaining the Reduction of the above (Fig. 24) into the computer space.
Fig. 26 is a flowchart for explaining the logical structure of the program called 'W02 Homogeneity Vector' .
Fig. 27 is a flowchart for explaining the logical structure of the program called 'W03 Duplication Vector' .
Fig. 28 is a flowchart for explaining the logical structure of the program called 'W03 Homogeneity Vector' .
Fig. 29 is a flowchart for explaining the logical structure of the program called 'W04 Duplication Vector' .
Fig. 30 is a flowchart for explaining the logical structure of the program called 'W04 Signification Vector' .
Fig. 31 is a flowchart for explaining the logical structure of the 'Pallet Function' .
Fig. 32 is a flowchart for explaining the logical structure of the 'Pallet Chain Function.'
Fig. 33 is a flowchart for explaining the logical structure of the 'Command Action Vector' .
Fig. 34 is a flowchart for explaining the logical structure of the 'Routing Action Vector' .
Fig. 35 is a flowchart for explaining the logical structure of the 'Routing Action Vector'.
Fig. 35 is a flowchart for explaining the logical structure of the 'Work Requirement Action Vector'
Fig. 36 is a flowchart for explaining the logical structure of the 'Structural Adjustment Action Vector' .
Fig. 37 is a conceptual diagram for explaining the univocal semantic quality in the Consciousness meaning-space for every word, which is a root of the meaning.
Fig. 38 is a diagram for explaining the concept of Reduction.
Fig. 39 is a conceptual diagram for explaining the Homogeneity Map.
Fig. 40 is an example of the Homogeneity Map for explaining in the inscription rule of the Homogeneity Map.
Fig. 41 is a diagram for explaining conceptually the scheme by which a certain semantic quality is recognized as a meaning by humans.
Fig. 42 is a diagram for explaining that Homogeneity Vector mounted on W03 Pallet is a function, when Scenario Function is Reduced into the computer space, thereby obtaining the prescribed function.
Fig. 43 is a diagram for explaining the state in which semantic quality is embodied into the Natural meaning-space as an existence phenomenon and Reduced into the computer space.
Fig. 44 is a diagram for explaining logical structures of W02 Homogeneity Vector, W03 Duplication Vector and W03 Homogeneity Vector, which are included in the five kinds of Tense Control Vector concerned with Media Identifier and Word Identifier.
Fig. 45 is a diagram for explaining logical structures of W02 Homogeneity Vector, W03 Duplication Vector and W03 Homogeneity Vector, which are included in the five kinds of Tense Control Vector concerned with Media Identifier and Word Identifier.

Fig. 46 is a conceptual diagram for explaining the sufficient constituent elements necessary to establish a concept of a program.

Fig. 47 is a conceptual diagram for explaining the scheme to operate autonomously.

Fig. 48 shows parameters to determine the elements of Tense Control Vector, explaining the theoretical grounds of autonomy.

Fig. 49 is a diagram for explaining, by using a flowchart of Tense Control Vector and a series of codes which correspond to the flowchart, the theoretical grounds of Tense Control Vector ' s autonomous operation, which is an example of the Homogeneity Vector mounted on W03 Pallet.

Fig. 50 is a conceptual diagram for explaining the theoretical grounds of the Acceptance logic 'Existent?' .

Fig. 51 is a conceptual diagram for explaining the state of plural Homogeneity Vectors in correspondence to one data field.

Fig. 52 is a conceptual diagram for explaining the principle of software determination based on the present invention.

Fig. 53 is a diagram for explaining the Providence of Existence conceptually.

Fig. 54 is a flowchart for explaining the logical structure of the Pallet Chain Function.

Fig. 55 is a flowchart for explaining the logical structure of the Pallet Function placed on W02 Pallet.

Fig. 56 is a conceptual diagram for explaining the corresponding relation among the Providence of Existence' s action from Revelation to Association and Pallet Chain Function in Scenario Function, Pallet Function and Tense Control Vector.

Fig. 57 is a flowchart for explaining the logical structure of the Pallet Function placed on W03 Pallet.

Fig. 58 is a conceptual diagram for explaining the corresponding relation among the Providence of Existence' s action from Association to Coupling and Pallet Chain Function in Scenario Function, W04 Pallet' s Pallet Function and W04 Pallet' s Tense Control Vector.

Fig. 59 is a flowchart for explaining the logical structure of the W04 Pallet Function placed on W04 Pallet.

Fig. 60 is a flowchart for explaining the logical structure of the Action Vector identified by an Action Operator j.

Fig. 61 is a conceptual diagram for explaining that the essence of program is composed of elements of data field, process logic and data code, if it is grasped based on the theoretical grounds of the Providence of Existence.

Fig. 62 is a conceptual diagram for explaining that as to the type of data structure there are three kinds: $\alpha$-type, $\beta$-type and $\gamma$-type.

Fig. 63 is a conceptual diagram to show an example of the system of the determination of logical record of the Synchronous Data Structure.

Fig. 64 is a diagram to show the sequence of work steps of the software development based on the present invention.

Fig. 65 is a diagram to show an example of Definitive Lookup Table.

Fig. 66 is a diagram to show an example of Homogeneity Map.

Fig. 67 is a diagram to show an example of Definitive Lookup Table.

Fig. 68 is a diagram to show an example of W04 Pallet Word Table.

Fig. 69 is a diagram to show an example of W04 Pallet Word Table.

Fig. 70 is a diagram to show an example of W02 Pallet Word Table.

Fig. 71 is a diagram to show an example of W02 Pallet Word Table.

Fig. 72 is a diagram to show an example of W03 Pallet Word Table.

Fig. 73 is a diagram to show an example of W03 Pallet Word Table.

Fig. 74 is a diagram for explaining a Function that determines program composed of a series of codes of W02 Homogeneity Vector which is concerned with words with Identifier i belonging to Definitive Identifier k.

Fig. 75 is a diagram for explaining a Function that determines program composed of a series of codes of W03 Duplication Vector which is concerned with words with Identifier i belonging to Definitive Identifier k.

Fig. 76 is a diagram for explaining a Function that determines program composed of a series of codes of W03 Homogeneity Vector 4433 which is concerned with words with Identifier i belonging to Definitive Identifier k.

Fig. 77 is a diagram for explaining the inducement condition of the various points of principle theoretical base of the present invention concerning Action Vector placed on W03 Pallet.

Fig. 78 is a diagram for explaining the relation between Homogeneity Vector of the words belonging to File and Command Action Vector.

Fig. 79 is a flowchart for explaining the logical structure of the Command Action Vector.

Fig. 80 is a diagram for explaining an example of the codes of the Command Action Vector.

Fig. 81 is a flowchart for explaining the logical structure of the Work Requirement Action Vector.

Fig. 82 is a diagram for explaining an example of the codes of the Work Requirement Action Vector.

Fig. 83 is a flowchart for explaining the logical structure of the Routing Action Vector.

Fig. 84 is a diagram to show an example of the codes of the Routing Action Vector.
Fig. 85 is a diagram for explaining a Function that determines program composed of codes of W04 Duplication Vector which is concerned with words with Identifier i belonging to Definitive Identifier k.
Fig. 86 is a diagram for explaining a Function that determines program composed of codes of W04 Homogeneity Vector which is concerned with words with Identifier i belonging to Definitive Identifier k.
Fig. 87 is a diagram for explaining the inducement condition of Action Vector placed on W03 Pallet.
Fig. 88 is a diagram to show the codes of the Action Vector with a structure of implementing Refusal Flag Set.
Fig. 89 is a diagram to show the codes of the Action Vector with a structure of emptying the File-related data field.
Fig. 90 is a diagram to show the codes of the Route's Structural Adjustment Action Vector placed on W04.
Fig. 91 is an example of the codes of the Activate part of Pallet Chain Function.
Fig. 92 is an example of the codes of the 'Each Pallet Activate' part of Pallet Chain Function.
Fig. 93 is a diagram for explaining Pallet Activate of Pallet Chain Function.
Fig. 94 is a diagram to show an example of the codes of 'W02 Pallet Activate' , 'W04 Pallet Activate' and 'W03 Pallet Activate'
Fig. 95 is a diagram to show an example of the codes of the Pallet Chain Function.
Fig. 96 is a diagram to show an example of the codes of W04 Pallet Activate.
Fig. 97 is a diagram to show codes of W02 Pallet Activate, W03 Pallet Activate and W04 Pallet Activate.
Fig. 98 is a conceptual diagram for explaining, by corresponding to the Pallet concept, the scheme of cognition/awareness that induces a meaning.
Fig. 99 is a conceptual diagram for explaining conceptually the relation between T0 and T1 of Scenario Function.
Fig. 100 is a conceptual diagram for explaining W03 in Scenario Function T1, by corresponding to Scenario Function T1.
Fig. 101 is a flowchart for explaining the various points possessed by W02 Actin Vector of Scenario Function T1.
Fig. 102 is a flowchart for explaining the various points possessed by W02 Homogeneity Vector of Scenario Function T1.
Fig. 103 is a flowchart to explain the various points possessed by W03 Signification Vector of Scenario Function T1.
Fig. 104 is a flowchart for explaining the various points possessed by W03 Action Vector of Scenario Function T1.
Fig. 105 is a flowchart for explaining the various points possessed by W04 Homogeneity Vector of Scenario Function T1.
Fig. 106 is a flowchart for explaining the various points possessed by W04 Action Vector of Scenario Function T1.
Fig. 107 is an example of the terms uttered by the party requiring software production.
Fig. 108 is a diagram to show an example of the Definitive Identifier Lookup Table.
Fig. 109 is a diagram to show an example of the image of the format of Definitive.
Fig. 110 is a diagram to indicate a Homogeneity Map (the first stage) of the Conversion Value Standard Ledger Management Screen.
Fig. 111 is a diagram to indicate a Homogeneity Map (the second stage) of the Conversion Value Standard Ledger Management Screen.
Fig. 112 is a diagram to indicate a Homogeneity Map (completion) of the Conversion Value Standard Ledger Management Screen.
Fig. 113 is a diagram to show an example of the classification of the characteristic of the data structure of 'Receive Screen' and 'Send Screen'
Fig. 114 is a diagram for explaining the method to determine the 'Synchronous Data Structure' based on its various points of the theoretical base.
Fig. 115 is a diagram to show the process to determine the Synchronous Data Structure.
Fig. 116 is a diagram to show an example of the Definitive Identifier Lookup Table.
Fig. 117 is a diagram to show an example of the Homogeneity Map concerned with Scenario Function T1.
Fig. 118 is a diagram to show an example of the Homogeneity Map Information Lookup Table.
Fig. 119 is a diagram to show an example of the W04 Pallet Word Table.
Fig. 120 is a diagram to show an example of the W04 Pallet Word Table.
Fig. 121 is a diagram to show an example of the W02 Pallet Word Table.
Fig. 122 is a diagram to show an example of the W02 Pallet Word Table.
Fig. 123 is a diagram to show an example of the W03 Pallet Word Table.
Fig. 124 is a diagram to show an example of the W03 Pallet Word Table.
Fig. 125 is a flowchart to show the logical structure of the 'W04 Duplication Vector' Function and its Program Template composed of a series of codes.
Fig. 126 is a flowchart to show the logical structure of the 'W04 Homogeneity Vector' Function and its Program Template comprised of code column.
Fig. 127 is a flowchart to show the logical structure of the 'W04 Action Vector' Function and its Program Template comprised of code column.

Fig. 128 is a flowchart to show the logical structure of the 'W02 Signification Vector' Function and its Program Template composed of a series of codes.

Fig. 129 is a flowchart to show the logical structure of the 'W03 Duplication Vector' Function and its Program Template composed of a series of codes.

Fig. 130 is a flowchart to show the logical structure of the 'W03 Homogeneity Vector' Function and its Program Template composed of a series of codes.

Fig. 131 is a flowchart to show the logical structure of the 'W03 Action Vector' Function and its Program Template composed of a series of codes.

Fig. 132 is a block diagram concerned with one embodiment of the implementation of the present invention.

Fig. 133 is a conceptual diagram of the relation between Word and Pallet concerned with the process control software which is one between of the implementation of the present invention.

Fig. 134 is an example of the initial Screen concerned with a software creation apparatus, which is one embodiment of the implementation of the present invention.

Fig. 135 is an example of the Menu Screen concerned with a software creation apparatus, which is one embodiment of the implementation of the present invention.

Fig. 136 is an example of the Definitive Identifier Registration Lookup Screen concerned with a software creation apparatus, which is one embodiment of the implementation of this invention.

Fig. 137 is an example of the Definitive Identifier Entry Screen concerned with software creation device, which is one form of the implementation of the present invention.

Fig. 138 is an example of the Word Identifier Lookup Screen concerned with a software creation apparatus, which is one form of the implementation of this invention.

Fig. 139 is an example of the Homogeneity Map Identifier Lookup Screen concerned with a software creation apparatus, which is one embodiment of the implementation of the present invention.

Fig. 140 is an example of the Homogeneity Map Identifier Entry Screen concerned with a software creation apparatus, which is one embodiment of the implementation of the present invention.

Fig. 141 is an example of the Homogeneity Map Identifier Lookup Screen concerned with a software creation apparatus, which is one embodiment of the implementation of the present invention.

Fig. 142 is an example of the Pallet Identifier Registration Screen concerned with a software creation apparatus, which is one embodiment of the implementation of the present invention.

Fig. 143 is an example of the Pallet Identifier Lookup Screen concerned with a software creation apparatus, which is one embodiment of the implementation of the present invention.

Fig. 144 is an example of the Word Table Registration Screen concerned with asoftware creation apparatus, which is one embodiment of the implementation of the present invention.

Fig. 145 is an example of the Word Table Registration Screen concerned with asoftware creation apparatus, which is one embodiment of the implementation of the present invention.

Fig. 146 is an example of the Word Table Registration Screen concerned with asoftware creation apparatus, which is one embodiment of the implementation of the present invention.

Fig. 147 is an example of the Word Table Registration Screen concerned with asoftware creation apparatus, which is one form of the implementation of the present invention.

Fig. 148 is an example of the Word Requirement Registration Screen concerned with a software creation apparatus, which is one embodiment of the implementation of the present invention.

Fig. 149 is an example of the Source Code Automatic Generation Direction Screen, which is one embodiment of the implementation of the present invention.

Fig. 150 is an example of the Result Management Screen concerned with a software creation apparatus, which is one form of the implementation of the present invention.

Fig. 151 is an example of the Result Management Screen concerned with a software creation apparatus, which is one embodiment of the implementation of the present invention.

Fig. 152 is an image diagram concerned with one embodiment of the implementation of the present invention.

Fig. 153 is a Homogeneity Map of the integration process of online (T0) and offline (T1), which is one embodiment of the implementation of the present invention.

Fig. 154 is the Homogeneity Map concerned with one embodiment of the implementation of the present invention.

Fig. 155 is the relational diagram of Pallet and Word' s data field concerned with one embodiment of the implementation of the present invention.

Fig. 156 is the Lookup Management Diagram of Action Vectors for each Pallet concerned with one embodiment of the implementation of the present invention.

Fig. 157 is a conceptual diagram for explaining the requirement by focusing on the Definitive.

Fig. 158 is a flowchart of the work process concerned with the traditional method, against the requirement of Fig.

157.

Fig. 159 is a program composed of codes of the traditional method which corresponds to the flowchart of the work process concerned with the traditional method of Fig. 158.

Fig. 160 is a conceptual diagram for explaining the placement of Pallet-wise Tense Control Vector (T0) of the present invention against the requirement of Fig. 157.

Fig. 161 is a conceptual diagram for explaining the placement of Pallet-wise Tense Control Vector (T1) of the present invention against the requirement of Fig. 157.

Fig. 162 is a conceptual diagram for explaining the state on the course of process of Tense Control Vector (T0) of Fig. 160.

Fig. 163 is a conceptual diagram for explaining the state on the course of process of Tense Control Vector (T1) of Fig. 161.

Fig. 164 is a conceptual diagram for explaining development steps and step-wise work items of software development based on the traditional method.

Fig. 165 is a conceptual diagram for explaining the nature of development steps and step-wise work items of software development based on the traditional method.

Fig. 166 is a conceptual diagram for explaining the scheme of software development based on the present invention.

Fig. 167 is a conceptual diagram for explaining development steps and step-wise work items of software development based on the present invention.

Fig. 168 is a conceptual diagram for explaining the nature possessed by the source code produced by the traditional method.

Fig. 169 is a conceptual diagram for explaining the nature possessed by the source code produced by this invention.

Fig. 170 is a conceptual diagram for explaining that various kinds of the disclosed items of this invention are universal.

Fig. 171 is a conceptual diagram for explaining that various kinds of the disclosed items of the present invention are universal.

Fig. 172 is a conceptual diagram for explaining the traditional method and the present invention by using mathematical inscription of a software production.

Fig. 173 is a conceptual diagram for explaining the concept of a Word, which is one embodiment of the implementation of the present invention.

6. The Best Embodiment of the invention

As aforementioned, in LYEE, a software to be produced (requirement and program) is determined by the method of the solution of the function called ' Scenario Function' . As a solution of this Scenario Function, the procedure to determine the software, the backgrounds of the theory, etc. were already mentioned in '4.3.8 Determination Procedure of Software' , so related explained is omitted.

The detailed description on the best embodiment of the present invention is made concretely hereafter by using drawings.

<Determination of Definitive Identifier (step 6401)>

We take an example of a requirement of a certain manufacturing firm to develop an information processing system which assists budget management work. Fig. 107 is a diagram which shows terms clearly uttered by the party requiring the software production so as to improve the efficiency of management of the Conversion Value Standard Ledger ' in which conversion values of variety of expenditures are collected.

Software development to satisfy the requirement composed of such terms as clearly uttered is initiated, in case of those who use the system, by the work of placing these terms as data field or Direction Command (that is, as 'Word' for either case) onto a media enabling visual and direct recognition of information, for example, a Screen.

At first, 'Definitive Identifier' is determined, which identifies the Screen to which the clearly uttered terms are made to belong as Words. For example, an identifier with the (Screen) name of 'Conversion Value Standard Ledger Management' is determined as 'UGECG907' . For assigning identifier, no other particular restrictions are required, as long as it is the univocal, just as meant by the term 'identifier.' Hereafter, such a medium and the related identifier shall also be displayed as 'Conversion Value Standard Ledger Management Screen (UGECG907)' .

It is more effective if the determined 'Definitive Identifier' is inscribed as a memo in a document called, for example, the one called 'Definitive Identifier Lookup Table' .

Fig. 108 is a diagram to show the example of such Definitive Identifier Lookup Table. As shown in the Fig., it is more effective if such Definitive Identifier Lookup Table are accommodated with items, for example, requirement/function name, Definitive name, Definitive Identifier, and locations of installment. An example of the same Fig. shows a case of 'Conversion Value Standard Ledger Management' Further, the ' Definitive Identifier Lookup Table ' as a memorandum may as well be made into an electronic document by using a software development support tool (thereby naming it, for example ' Definitive ID Lookup' ), for example the tool called 'LyeeALL' that has already been applied to practical use

Also, as memorandum, it is additionally recommended, from viewpoint of efficiency, to create an image diagram, as shown by Fig. 109, indicating its form of the Definitive of the media whose Definitive Identifiers has been determined

Further, to be noted in creating this kind of image diagram is to reflect faithfully the terms uttered clearly by the party requiring software production, and not to add personal interpretation.

Hereupon, among terms, 'verbs' are classified as 'Operation Key' or 'Direction Command' , 'objects' are as 'data field', and terms meaning singular/plural condition are as a 'data field' structure, into elements of the image diagram, respectively

For example, in terms of <acknowledge> <all the contents> of the <Conversion Value Standard Ledger> of some <factory>' , the <acknowledge> which is a verb is regarded as 'Direction Command' and expressed in the image diagram as it is.

In a 'object' <factory 10701>, the singular/plural condition is not shown clearly, so it is regarded as a single 'data field' and shown in the image diagram 10901 as it is.

In a 'object' <Conversion Value Standard Ledger 10702>, the plural condition of <all the contents 10703> is shown clearly, so it is regarded as a 'data field' composed of plural lines and shown in the image diagram 10902 as it is.

The <contents of Conversion Value Standard 10705> is meant by the terms <conversion code 10706>, <cost category 10707>, <work step category 10708>, <conversion category 10709>, <management category 10710>, <management category name 10711>, and <manufacturing cost collective standard value 10712> and they are expressed as they are in the image diagrams: 10903, 10904, 10905, 10906, 10907, 10908 and 10909.

Terms '<select 10714> <it 10713>' are regarded each a single 'verb' and 'object' and shown in the image diagrams 10910 and 10911.

As to the terms '<Register 10716> of <Conversion Value Standard 10715>' , '<Modify 10718> of <Conversion Value Standard 10717>' '<Delete 10720> of <Conversion Value Standard 10719>,' since all of them are composed of 'verbs' and 'objects' , so the former 'verbs' are expressed as 'Direction Command' 10913, 10914 and 10915 whereas the latter 'objects' are expressed as 'data field' in the image diagram as they are.

Among terms '<Conversion Value Standard 10723> to <Register 10721> or <Modify 10722> <shall be enabled 10725> only to the <company ' s generally-specified Standard Value 10724>', the 'object' <company' s generally-specified Standard Value 10724> is shown in the image diagram as a data field 10916, and the term <shall be enabled 10725> means which <company ' s generally-specified Standard Value 10724> is <applied> to Register 10721 / Modify 10722, the former 'object' is expressed as a 'data field' 10917 in the image diagram 10918 as it is, and the latter 'verbs' are also expressed in the image diagram as Direction Command.

<Creation of Homogeneity Map (step 6403)>

Assuming the 'Data Field' and 'Direction Command' that are clarified in the image diagram in the medium format of Screen which is identified by the determined Definitive Identifier (k) are called 'Words,' creating a Homogeneity Map, is a work to express, as diagram, the result of solving the ' Scenario Function ' by substituting the Definitive Identifies (k) and Word Identifier (i), which univocally identifies those individual Words, into the independent variable of 'Scenario Function.'

Fig. 110 is a diagram to show how the first stage of creating the HomogeneityMap goes concerned with the aforementioned Conversion Value Standard Ledger Management Screen (UGECG907).

First, as shown by the Fig., the various points of the Homogeneity Map takes 'Menu' (6601) as a premise, so the role of 'Menu' is inscribed in box (block 11001).

Next, already-determined Definitive Identifier (UGECG907), concerned with Conversion Value Standard Ledger Management Screen, is to be substituted into the independent variable "k" of Scenario Function

$$T0 = \Phi 0 (\{\Phi p (k, 2) \{L2(k, i)\} \}k$$

$$+ \Phi p (k, 3) \{Y3 (k, i), L3(k, i)\}$$

$$+ \{\Phi p (k, 4) \{Y4(k, i) , L4(k, i)\}\} k)$$

As a result, the Scenario Function becomes as follow:

$$T0 = \Phi 0 (\{\Phi p (UGECG907, 2) \{L2(UGECG907, i)\}\}$$

$$+ \Phi p (k, 3) \{Y3 (UGECG907, i), L3(UGECG907, i), P3(j),$$

$$T1(f)\}$$

$$+ \{\Phi p (UGECG907, 4) \{Y4(UGECG907, i), L4(UGECG907,$$

$$i), P4(j)\}\}\})$$

In this Scenario Function, the 'Φp (UGECG907, 2) {L2(UGECG907, i) part means that W02 Pallet concerned with Conversion Value Standard Ledger Management Screen (UGECG907) was determined and its Pallet Identifier was determined, for example, as UGECG907W02. The 'L2(UGECG907, i)' part means that it is a Homogeneity Vector of every Word belonging to Conversion Value Standard Ledger Management Screen (UGECG907), and if an identifier of the Word is determined and substituted into the independent variable i, the requirement and codes of Homogeneity Vector can be univocally determined.

Also, the '{Φp (UGECG907, 2) {}' part means that W02 Pallet' s Pallet Function was determined, and an identifier of the Pallet Function was determined as 'UGECG907W02' , the same as Pallet Identifier. The ' {} ' part is an action to structurize all of Homogeneity Vector of every Word belonging to Conversion Value Standard Ledger Management Screen (UGECG907), and indicates the structuring result is W02 Pallet.

The 'Φp (k, 3) {Y3 (UGECG907, i) , L3(UGECG907, i), P3(j), T1(f)}' part means that W03 Pallet was determined and its Pallet Identifier was determined, for example, as 'W03' . The 'Y3 (UGECG907, i)' and 'L3(UGECG907, i)' parts mean that they are Tense Control Vectors (Duplication Vector and Homogeneity Vector) of every Word belonging to Conversion Value Standard Ledger Management Screen (UGECG907), and they can be univocally determined as a requirement and codes of Tense Control Vector, if the identifier of the Word is determined and substituted into the independent variable 'i' .

The P3(j) part means that it is Action Vector to be mounted on W03 Pallet, and if the action operator "j" is determined based on the various points possessed by Scenario Function, the requirement and code column of Action Vector can be univocally determined. Also, the 'T1(f)' part means that this part is Scenario Function T1 mounted on W03 Pallet, and if Definitive Identifier "f" of the final object File is determined based on the various points possessed by Scenario Function, the requirement and codes of Action Vector can be univocally determined.

The 'Φp (k, 3) {}' part means that W03 Pallet' s Pallet Function was determined, and its Pallet Identifier was determined, for example, as 'W03'. The '{}' part, at this point of solving Scenario Function by the already-determined Conversion Value Standard Ledger Management Screen (UGECG907), is an action to gather Tense Control Vector, Action Vector and Scenario Function T1 of every Word belonging to Conversion Value Standard Ledger Management Screen (UGECG907), and the gathering result is W03 Pallet.

Also, the '(UGECG907, 4) {Y4(UGECG907, i), L4(UGECG907, i), P4(j)}' part means that W04 Pallet concerned with Conversion Value Standard Ledger Management Screen (UGECG907) was determined, and the Pallet Function Identifier was determined, for example, as 'UGECG907W04' .

The 'Y4(UGECG907, i)' and 'L4(UGECG907, i)' parts mean that they are Tense Control Vectors (Duplication Vector and Homogeneity Vector) of every Word belonging to Conversion Value Standard Ledger Management Screen (UGECG907), and they can be univocally determined as a requirement and codes of Tense Control Vector, if the identifier of the Word is determined and substituted into the independent variable "i" .

Also, the '{Φp (UGECG907, 4) {}' part means that W04 Pallet' s Pallet Function was determined, and an identifier of the Pallet Function was determined as 'UGECG907W04' , the same as Pallet Identifier. The '{}' part is an action to gather Tense Control Vector and Action Vector of every Word belonging to Conversion Value Standard Ledger Management Screen (UGECG907), and the gathering result is W04 Pallet.

Also, the ' Φ0 ({Φp (UGECG907, 2){ }} + Φp (k, 3) {} + {Φp (UGECG907, 4) {}})' part means that this part is Pallet Chain Function, and the +' part means, at this point of solving Scenario Function by the already-determined Conversion Value Standard Ledger Management Screen (UGECG907), that an action was determined, which chains the Conversion Value Standard Ledger Management Screen (UGECG907)-related W02 Pallet (its Pallet Identifier has already determined the 'Φp (UGECG907, 2){} part being into 'UGECG907W02' ), W03 Pallet (its Pallet Identifier has already been determined the 'Φp (k, 3){} part being as 'W03' ), and W04 Pallet (its Pallet Identifier has already been determined by 'Φp (UGECG907, 4){}' part being as 'UGECG907W04' ). Specifically, it means the logic, which appoints and activates a program identified by each Pallet Function Identifier, has been determined.

As mentioned above, it means that, by substituting the already-determined Conversion Value Standard Ledger Management Screen Definitive Identifier (UGECG907) into the independent variable 'k' of Scenario Function, each Pallet Identifier of W02 Pallet, W03 Pallet and W04 Pallet, as well as of the logic by which Pallet Chain Function chains those Pallets, are determined.

Thereupon, in accordance with the various points possessed by Homogeneity Map, the W04 Pallet is inscribed in box (block 11003) which is identified by Definitive Identifier 'UGECG907' at first.

Next, the '+' of the 'Φp (+ {Φp (UGECG907, 4) {}})' is expressed asa diagram, which was obtained by substituting W04 Pallet (11003) identified by the Definitive Identifier 'UGECG907,' into Pallet Chain Function. That is, the line-connection (11005) is established between the 'Menu' box (block 11001) and W04 Pallet box (block 11003) identified by the Definitive Identifier 'UGECG907' . This connection means that Pallet Chain Function determined a logic which activates W04 Pallet program identified by Pallet Function Identifier 'UGECG907W04' , thereby enabling the Chain. It is confirmed that this is the 'corresponding W04 Pallet Activate' part (step 3219) of the various points of Pallet Chain Function.

Next, according to the various points of Pallet Chain Function, the next logic of the 'corresponding W04 Pallet Activate' part (step 3219) must be 'Send Function' (step 3221). It is a conclusion of the various points of the theoretical base of Scenario Function that the determination of the Send object is a role of 'Routing Action Vector' which is mounted on W04 Pallet. Thereupon, in Scenario Function solved at this point by the Conversion Value Standard Ledger Management Screen (UGECG907), the '(UGECG907, 4) {Y4(UGECG907, i), L4(UGECG907, i), P4(j)}' ' part of W04 Pallet Function is scrutinized again.

Then, it proves that independent variables 'i' and 'k' have not been determined. Hereupon, it is clear from the various points of the theoretical base of Scenario Function that the independent variable 'i' is an identifier of Words belonging to Conversion Value Standard Ledger Management Screen (UGECG907). Therefore, this independent variable 'i' can be univocally determined as Word Identifier that identifies 'data field' and 'Directive Command' , which were clarified in the image diagram of the format of medium of Conversion Value Standard Ledger Management Screen (UGECG907).

For example, if the 'data field' concerned with 'factory' which was clarified in the image diagram in the medium format of Conversion Value Standard Ledger Management Screen (UGECG907) is determined by the identifier 'FACTCD' , the codes concerned with W04 Pallet Function ' s independent variable ' i ' , i.e., 'Y4(UGECG907, i)' and 'L4(UGECG907, i)' , can be univocally determined as the following, in Visual Basic programming language, based on the various points of Pallet Chain Function.

```
' W04 Duplication Vector of 'factory (FACTCD)'
Private Sub Y4_UGECG907_FACTCD()
' Judgement of Empty (W02)
If W02.UGECG907_FACTCD <> "" Then
' Duplication from W02
      W04. UGECG907_FACTCD = W02.UGECG907_FACTCD
Else
' Judgement of Empty (W03)
If W03.UGECG907_FACTCD <> "" Then
' Duplication from W03
      W04. UGECG907_FACTCD = W03.UGECG907_FACTCD
    EnD If
  EnD If
EnD Sub
' W04 Homogeneity Vector of 'factory (FACTCD)'
Private Sub L4_UGECG907_FACTCD()
' Judgement of Empty
If W04.UGECG907_FACTCD <> W04.UGECG907_FACTCD Then
      Exit Sub
EnD If
'Self Creation
W04.UGECG907_FACTCD = W04.UGECG907_FACTCD
' Acceptance Judgment
If W04.UG13CG907_FACTCD <> W04.UGECG907_FACTCD Then
      Exit Sub
EnD If
' W02 Refusal Judgment
If W02.UGECG907_FACTCD_Non = True Then
```

```
        W04. MSGE_TBL(UGECG907_FACTCD_M)= " factory W02 error code"
        W02.UGECG907_FACTCD_Non = False
Else
If W03.UGECG907_FACTCD_Non = True Then
        W04. MSGE_TBL(UGECG907_FACTCD_M)= " factory W03 error code"
        W03.UGECG907_FACTCD_Non = False
    EnD If
  EnD If
EnD Sub
```

The Gothic letter parts in these codes, that is, 'UGECG907_FACTCD_; mean that concrete identifiers were substituted into the independent variable of the function of 'Y4(UGECG907, i), L4(UGECG907, i)' .

At this point of solving Scenario Function by the already-determined Conversion Value Standard Ledger Management Screen (UGECG907), however, the ' W04. MSGE_TBL(UGECG907_FACTCD_M)= " factory W03 message code' and 'W04. MSGE_TBL(UGECG907_FACTCD_M)= " factory W03 message code' parts in these codes must be determined as a prescribed requirement, because they are incomplete template part as codes, while they are a necessary parts from the viewpoint of the theoretical base of Scenario Function.

That is, it means that a query must be issued to the party requiring software production and the determination must be made whether or not to prepare data field to display 'message' on the Conversion Value Standard Ledger Management Screen (UGECG907) as well as to make the 'Work Requirement Action Vector' Edit 'message' in the data field, as a prescribed requirement.

As a result of the query to the party requiring software production, if the message management is found required, there needs to be the determination of message code and message text corresponding to W02 Refusal Flag and W03 Refusal Flag for every Word, the accommodation of memory medium of 'message file' that memorizes them, and the addition of the data fields 'message code' and 'message text ' onto Conversion Value Standard Ledger Management Screen (UGECG907). This means that these new requirements have been drawn out not personally but from the theoretical base of Scenario Function.

At the same time, as a result of an action of 'Work Requirement Action Vector' for editing message, it is inevitably determined that 'message file OPEN' , 'File Word error code DETERMINE' , 'message file READ' and 'message text EDIT' are to be prepared. Additionally, as Action Vector to be prepared in W04 Pallet, 'Routing Action Vector' , 'Structural Adjustment Action Vector of File-related Refusal Flag Reset' and 'Structural Adjustment Action Vector of File-related Data Field Empty' are found necessary, which are drawn out from the theoretical base of Scenario Function.

At this point of solving W04 Pallet Function, however, since the requirement concerned with File has not been drawn out, it is not that 'Routing Action Vector' , 'Structural Adjustment Action Vector of File-related Refusal Flag Reset' and 'Structural Adjustment Action Vector of File-related Data Field Empty' were drawn out at this point. That is, the only 'Routing Action Vector' was drawn out at this moment.

The 'Routing Action Vector' can be univocally determined as following codes, thereby taking 'UGECG907RT' as its 'Action Operator' . ' W04 Pallet Routing Action Vector

```
Private Sub P4_ME_UGECG907RT()
' Execute Judgment
  If W04_ME_UGECG907RT <> "" Then
      Exist Sub
  EnD If
' Execute
' Route Setting
  CTRL.NxtScnID = ScrID_UGECG907
  CTRL.NxtPltID = PltID_UGECG907W02
  CTRL.Continue = True
  W04_ME_UGECG907RT_FLG = " 1"
' Acceptance Judgment
  If W04_ME_UGECG907RT <> " 1" Then
      Exit Sub
    EnD If
EnD Sub
```

and Pallet Chain Function shall implement Send to Screen operation based on the codes 'CTRL.NxtScnID = ScrID_UGECG907' .

Next, according to the various points of Pallet Chain Function, the logics following 'Send Function' (step 3221) are 'Receive Function' (step 3227) and the 'corresponding W02 Pallet Activate' (step 3231).

Thereupon, since in the Scenario Function 'Φ0 ({Φp (UGECG907, 2){ }} + Φp (k, 3) {} + {Φp (UGECG907, 4) {}})' solved at this point of solving Scenario Function by Conversion Value Standard Ledger Management Screen (UGECG907), W02 Pallet has been determined as 'Φp (UGECG907, 2){}', so it is inscribed on the right of the 'W04 Pallet' box (block 11003) as a 'W02 Pallet' box that is identified by Pallet Identifier of 'UGECG907W02'.

Further, Send and Receive to the Conversion Value Standard Ledger Management Screen (UGECG907) 11009 are expressed in diagram (11011, 11013), and they are connected with the 'W02 Pallet' box (block 11007) as 'W02 Pallet' Activate following Receive (11013).

Next, the 'Φp (UGECG907, 2){L2(UGECG907, i) part of W02 Pallet Function of the Scenario Function solved at this point of solving Scenario Function by Conversion Value Standard Ledger Management Screen (UGECG907) is scrutinized again. Then, it is known that the independent variable 'i' has not been determined. Hereupon, the independent variable 'i' is an identifier of Words belonging to Conversion Value Standard Ledger Management Screen (UGECG907) (block 11009) based on the various points of Scenario Function. Therefore, this independent variable 'i' can be fulfilled by Word Identifier to be determined at the stage of solution of W02 Pallet Function.

For example, the 'data field' concerned with 'factory' which was clarified in the image diagram in the medium format of Conversion Value Standard Ledger Management Screen (UGECG907) has been determined as identifier of 'FACTCD' , so the codes 'L2(UGECG907, i' concerned with the independent variable 'i' of W02 Pallet Function can be univocally determined as following codes in Visual Basic programming language.

```
' W02 Homogeneity Vector of factory (FACTCD)
Private Sub L2_UGECG907_FACTCD ()
' Judgement of Empty
  If W02. UGECG907.FACTCD = "" Then
      Exit Sub
  EnD If
' Attribute Check
  If Is******(W02. UGECG907.FACTCD) = True Then
      Exit Sub
  EnD If
' Acceptance Judgment
  If W02. UGECG907.FACTCD <> "" Then
      Exit Sub
  EnD If
' Adding the number of the times of Restart
  W02. UGECG907.FACTCD_CNT = UGECG907_FACTCD_CNT + 1
' Restart
  I f W02_UGECG907.FACTCD_CNT < W02_RECALL_MAX Then
' Restart Flag Set
      W02_RECALL_FLG = True
  EnD If
' Refusal
  If W02_UGECG907.FACTCD_CNT >= W02.RECALL_MAX Then
' Refusal Flag Set
      UGECG907.FACTCD_Non = True
  EnD If
End Sub
```

The Gothic letter parts in these codes, namely, 'UGECG907.FACTCD_,' mean that concrete identifiers were substituted into the independent variable part of the function of 'L2(UGECG907, i). At this point of solving Scenario Function by Conversion Value Standard Ledger Management Screen (UGECG907) 11009, however the 'If Is****** (W02. UGECG907.FACTCD) = True Then' part must be determined as a prescribed requirement, because it is incomplete as codes rather it is nothing but a template itself, while being necessary in view of the various points of Scenario Function.

That is, as a prescribed requirement, it is necessary to define Type Attribute' and 'Input/Output Attribute' of the data codes in the data field 'factory' which is prepared on the Conversion Value Standard Ledger Management Screen (UGECG907) 11009, and they must be determined by querying to the party requiring software production.

As a result of the query to the party requiring software production, for example, if the input/output attribute is either input attribute or input/output co-use attribute and if the type attribute of the data code is 'numeric,' it is univocally determined as follows:

If IsNumeric(W02.UGECG907.FACTCD) = True Then For example, if its Input/Output Attribute is 'input,' it is determined so as to establish a state of waiting for the inducement of semantic quality' concerned with Consciousness Unit-Link in which 'the Kuh' is established, that is 'Empty (Null)', it is univocally determined by specifying the following three lines:

```
        If Is******(W02. UGECG907.FACTCD) = True Then
            Exit Sub
    EnD If
```

as

```
        W02. UGECG907.FACTCD) = ""
        Exit Sub
```

Also, if the 'Direction Command' of 'confirm, ' which was clarified in the image diagram in the medium format of Conversion Value Standard Ledger Management Screen (UGECG907) 11009, is determined as identifier 'QURYCM' , the codes 'L2(UGECG907, i)' concerned with W02 Pallet Function' s independent variable 'i' can be univocally determined as follows in Visual Basic programming language based on the various points of Tense Control Vector.

```
' W02 Homogeneity Vector of Confirm (QURYCM)
Private Sub L2_UGECG907_QURYCM ()
' Judgement of Empty
  If W02. UGECG907.QURYCM = False Then
      Exit Sub
  EnD If
' Route Setting
  CTRL.NxtScnID = ScnID_*****
  CTRL.NxtPltID = PltID_*****
  CTRL.Continue = *****
W04_ME_UGECG907RT_FLG = " 1"
' Acceptance Judgment
  If W02.UGECG907.QURYCM = True Then
      Exit Sub
  EnD If
' Adding the number of the times of Restart
  W02_UGECG907.QURYCM_CNT = W02.UGECG907.QURYCM_CNT + 1
' Restart
  I f W02_UGECG907.QURYCM_CNT < W02_RECALL_MAX Then
' Restart Flag Set
      W02_RECALL_FLG = True
  EnD If
' Refusal
  If W02_UGECG907.QURYCM_CNT >= W02_RECALL_MAX Then
' Refusal Flag Set
      UGECG907.QURYCM_Non = True
  EnD If
End Sub
```

The Gothic letter part in these codes, namely, 'UGFCG907.QURYCM,' means that concrete identifiers were substituted into the independent variable part of the function of 'L2(UGECG907, i). At this point of solving Scenario Function by Conversion Value Standard Ledger Management Screen (UGECG907), however, the ' CTRL.NxtScnID = ScnID_*****' , ' CTRL.NxtPltID = PltID_*****' and ' CTRL.Continue = *****' parts in these codes must be determined as a prescribed requirement, because they are necessary but incomplete as codes in view of the various points of Scenario Function.

That is, as a prescribed requirement, it is necessary to define, concerning the ' Direction Command' of ' confirm' which is prepared on the on the Conversion Value Standard Ledger Management Screen (UGECG907) 11009, whether Scenario Function is required so as to activate Screen Identifier, Pallet Function and Pallet, which are to be operated next, and this determination shall be determined after querying to the party requiring software production.

In accordance with the result of the query, Homogeneity Map must be created so as to make the '"+"' of the '$\Phi$0({$\Phi$p(UGECG907,2){} + $\Phi$p(k,3){} + $\Phi$p(UGECG907,4){}})' into a diagram. That is, to the right of the ' W02 Pallet' box (block 11007) concerned with Conversion Value Standard Ledger Management Screen (UGECG907) 11009, the following are inscribed: a connection (11015) to branch the process route to the next-to-activate Pallet as well as respective branching connections for all words of Operation Keys or Direction Commands belonging to Conversion Value Standard Ledger Management Screen (UGECG907) 11009, for example, 'confirm' , 'select' , 'apply' , 'register' , 'modify', 'delete' , etc. (11017, 11019, 11021, 11023, 11025 and 11027).

Now, the determination of requirements against the Operation Keys or Direction Commands corresponding to each branching connection means as follows: As a result of the 'Direction Command' operation, either of the following routes is selected, a route of 'Continuous Chain' not via W03 Pallet or a route leading to 'Restart Chain' , 'Duplicate Chain' and 'Multiplex Chain' , via W03 Pallet, and it is queried to the party requiring software production. Hereupon, the 'Continuous Unit-Link' not via W03 Pallet' corresponds to the case of software not targeting process of the data code belonging to File and DB, for example, such as not succeeding the data code belonging to the Screen to the data field of words belonging to the next-to-send Screen. In this instance, it is not necessary go via W03 Pallet.

As a result of querying to the party requiring software production, assume that,for example, each 'Direction Command' transmitted clearly targets process of DB of ' Conversion Value Standard Ledger' .

Fig. 111 is a diagram showing the Homogeneity Map (the 2nd stage) of the Conversion Value Standard Ledger Management Screen (UGECG907).

As shown in the Fig., to the right of the respective branching destinations, 'W03 Pallet' is inscribed as boxes (block 11101 to 11027) and connected with each other. These connections mean a logic, by which Pallet Chain Function activates W03 Pallet, has been determined, and for example, a series of codes of the 'route setting' part of 'L2 (UGECG907,QURYCM' concerned with the 'confirm' Direction Command can be univocally determined as follows:

```
CTRL.NxtScnID = ScnID_UGECG907
CTRL.NxtPltID = PltID_W03
CTRL.Continue = True
```

Also, the connection is a role of 'Routing Action Vector' which is mounted on W03 pallet in accordance with the various points of Scenario Function, and, for example, a series of codes of the 'Routing Action Vector' , which rules 'Restart Chain' on the extension of W3 Pallet that was branched by the 'confirm' Direction Command, is univocally determined as follows if its operator is 'UGECG907_QURYCM_OKRT' :

```
' W03 Routing Action Vector 'confirm (QURYCM)'
Private Sub P3_ME_UGECG907_QURYCM_OKRT()
' Execute judgment
  If W03_ ME_UGECG907_QURYCM_OKRT_FLG <> "" AnD
  W02.UGECG907_QURYCM = False Then
      Exit Sub
  EnD If
' Execute
' Route setting
  CTRL.NxtScnID = ScnID_UGECG907
  CTRL.NxtPltID = PltID_UGECG907W04
  CTRL.Continue = True
  W03_ME_ UGECG907_QURYCM_OKRT_FLG = " 1"
' Acceptance judgment
  If W03_ UGECG907_QURYCM_OKRT_FLG = " 1" Then
      Exit Sub
  EnD If
EnD Sub
```

Further, according to the 'Various points of Homogeneity Map' based on the rule of Scenario Function, when the related Screen' s 'W04 Pallet' 11003 is connected from the 'Menu' Screen 11001, a returning route 4023 to 'Menu' Screen 11001 is necessary in principle. At this point of time, however, it is not clear which 'Direction Command' to specify such route, so it is queried to the party requiring software production.

As a result, a requirement was to unconditionally return by adding a 'Direction Command' of <Process End>, for example. In this instance, a branching connection of 'Continuous Chain' from 'W02 Pallet' 11007 is additionally inscribed (11125), and a branching destination is connected (11125) with a box (block 11001) of 'Menu' . For example, if Word Identifier of the Direction Command of 'Process End' is determined as 'ENDEND', a series of codes the 'L2 (UGECG907,i) concerned with independent variable 'i' of W02 Pallet Function can be univocally determined as follows in Visual Basic programming language in accordance with the various points of Tense Control Vector.

```
' W02 Homogeneity Vector of 'Process End (ENDEND)' Private Sub L2_UGECG907_ENDEND ()
' Empty judgement
  If W02.UGECG907. ENDEND = False Then
      Exit Sub
  EnD If
' Route setting
CTRL.NxtScnID = ScnID_MENU
CTRL.NxtPltID = PltID_MENUW04
CTRL.Continue = False
```

```
Exit Sub
Acceptance judgment
  If W02.UGECG907. ENDEND = True Then
      Exit Sub
  EnD If
' Adding the number of the times of Restart
  W02_UGECG907. ENDEND_CNT = W02_UGECG907.
ENDEND_CNT + 1
' Restart
  If W02_UGECG907. ENDEND_CNT < W02_RECALL_MAX Then
' Restart Flag Set
  W02_RECALL_FLG = True
  EnD If
' Refusal
If W02_UGECG907.QURYCM_CNT > = W02_RECALL_MAX Then
' Refusal Flag Set
      W02_UGECG907.QURYCM_Non = True
    EnD If
EnD Sub
```

As a result of the solution of the W02 Pallet Function concerned with 'Homogeneity Map,' the following items were inevitably drawn out from the rule of Scenario Function.

- Addition of Direction Command of 'Process End' to the Conversion Value Standard Ledger Management Screen (UGECG907)
- Addition of Type Attribute', 'Input/Output Attribute' for the data field belonging to the Conversion Value Standard Ledger Management Screen (UGECG907)
- Addition of 'Routing Action vector' to be mounted on W03 Pallet. That is, the ' uncertainty ' which was latent in the words transmitted clearly by the party requiring software production has been reduced as a conclusion of principle, but not as a result of personal examination. In other words, this leads to the effect that the present invention can break through the personality that could not be overcome by the traditional software development methodology.

Next, the condition to materialize 'Restart Chain' is scrutinized.

According to the rule of Scenario Function, when 'Input/Output Attribute' of the data field belonging to the self Screen is 'Input,' it is the case where a will appears that one wants to make adjustment (that is, ' synchronize ') of a semantic quality assumed by Consciousness Unit-Link that treated its Word Identifier identifying a data field by using W02 Homogeneity Vector and W03 Duplication Vector as Equivalent Logical Atom' s Deuteronomy order, so as to satisfy the rule of the Providence of Existence that was reduced into the computer space by inputting the data field via human operation.

The semantic quality of the data code is memorized in the data field of the main memory, and, in addition, it is normally memorized in the data field of File and DB.

On the other hand, when 'Input/Output Attribute' of the data field belonging to self Screen is 'Output,' it is the case where on waits for making adjustment of a semantic quality to the cognition desired by humans, (that is, this is also 'synchronize' ), which was assumed by Consciousness Unit-Link that treated its Word Identifier identifying the data field as Equivalent Logical Atom' s Deuteronomy order, and induced into the data field on the main memory as data code by W03 Homogeneity Vector (a data code of the 'semantic quality' is normally what has been memorized in the data field of File and DB and recognized), and embodied as a data code via the Screen' s data field through W04 Duplication Vector and W04 Homogeneity Vector.

Consequently, as a necessary and sufficient condition to materialize 'Restart Chain' , the inevitability of accommodation of File and DB is drawn out from the rule of 'Scenario Function' , which is called 'Synchronous Data Structure' that possesses data code composed of the same data field as the one belonging to the self Screen.

Thereupon, based on the result of solving Scenario Function up to this point by the Conversion Value Standard Ledger Management Screen (UGECG907) 11009 as well as the premise of the various points possessed by Scenario Function, the following are queried to the party requiring software production: the needs for the accommodation of such File and DB (that is, media to memorize semantic quality for synchronization that protects the loss of semantic quality upon a power shutdown) and a method of inducement of the data code that is embodied to the data field belonging to the self Screen.

That is, the result of solving W03 Pallet Function of the Scenario Function is as follows: Φ p(k,3) {Y3(UGECG907,i), L3(UGECG907,i), P3 (UGECG907_QURYCM_OKRT),, T1(f)}. Therefore, the data field belonging to the self Screen means Words belonging to the Conversion Value Standard Ledger Management Screen (UGECG907) 11009, which shall be queried to the party requiring software production on the premise of 'Duplication Vector' , 'Homogeneity Vector' , 'Action Vector' , 'Scenario Function T1' , based on the data code' s ' Type Attribute' and 'Input/Output Attribute' of the data field identified by the Word Identifiers.

As a result, the case is as follows, for example: the 'Conversion Value Standard Ledger' information is prepared on File or DB and the accommodation environment is called 'Server' , and it is desired to control it by a processing apparatus other than the one controlling Screen. In this instance, the need of 'Command Action Vector' for Message Send/Receive with such 'Server' is inevitably drawn out at first so as to satisfy the rule of 'Scenario Function' .

Fig. 112 is a diagram showing the Homogeneity Map (the 3rd stage) of the Conversion Value Standard Ledger Management Screen (UGECG907).

As shown in the Fig., after confirming Operation Key or Direction Command which stems an action of Message Send/Receive with such 'Server' , the 'Command Action Vector' of an action of Message Send/Receive with such 'Server' corresponding to the Operation Key or Direction Command is inscribed under the box of 'W03 Pallet' (block 11101 to 11111).

For example, in case of the 'Direction Command' of 'confirm' , a message is sent for making reference to File or DB recorded with the information concerned with the 'Conversion Value Standard Ledger' which was accommodated in 'Server' , and a display is made on Screen by receiving the message of the information, the 'Command Action Vector' for an action of Message Send and Message Receive with 'Server' (block 5001) is inscribed with an arrow (11201 and 11203) under the box (block 11101) of the 'W03 Pallet.'

For example, in case of the 'Directive Command' of 'select' , and if it is desired to have the selection from 'all the contents of the 'Conversion Value Standard Ledger' which is displayed on Screen by the 'Direction Command' of 'confirm' , and if the selected information is simply displayed in the field to implement 'Register' 'Modigy' ' Delete' , the action of Message Send/Receive with 'Server' is not required, so the 'Command Action Vector' for an action of Message Send and Message Receive is not inscribed.

For example, in case of the 'Direction Command' of 'apply' , and if it is desired to have the selection from ' Company General Standard ' which is displayed on Screen by the ' Direction Command' of 'confirm' , and if the selected information is simply displayed in the field to implement 'Register' 'Modify' 'Delete' , the action of Message Send/Receive with 'Server' is not required, so the 'Direction Action Vector' for an action of Message Send and Message Receive is not inscribed.

For example, in case of the 'Direction Command' of 'register' , 'modify' and 'delete' , the information in the field to implement 'register', 'modify' and 'delete' is sent as a message to 'Server', and the 'register' , 'modify' and 'delete' is implemented, in 'Server' , for the File or DB on which the information concerned with the 'Conversion value Standar5d Ledger' is recorded, and the result is displayed on Screen by receiving the message, the 'Command Action Vector' for an action of Message Send and Message Receive with 'Server' (block 5001) is inscribed with an arrow (11205 and 11207, 11209 and 11211, 11213 and 11215, respectively) , under the box (block 11107, 11109, 11111, respectively).

The process mentioned above is implemented in principle as a premise of the various points of 'Duplication Vector', 'Homogeneity Vector' , 'Action Vector', 'Scenario Function T1' and 'W03 Pallet Function' .

For the Homogeneity Map which was determined and inscribed as aforementioned, a solution to the individual elements of W03 Pallet which consists of the Scenario Function which was applied after the determination of the Homogeneity Map (that is, Duplication Vector, Homogeneity Vector, Action Vector and Scenario Function T1) is to be obtained. In this instance, conditions of the solution are concretely fitted. That is, Word Identifier, which is an independent variable, 'Type Attribute' and 'Input/Output Attribute' of the data filed identified by the Word Identifier are concretely substituted for determination.

For example, the 'data field' concerned with 'factory' which was clarified in the image diagram in the medium format of Conversion Value Standard Ledger Management Screen (UGECG907) has been determined as identifier 'FACTCD' , thus a series of codes 'Y3(UGECG907,i) concerned with Independent Variable 'i' of W03 Pallet Function can be univocally determined as follows, by using Visual Basic programming language, based on the various points of Tense Control Vector:

```
' W03 Duplication Vector of Word 'factory (FACTCD)'
Private Sub Y3_UGECG907_FACTCD ()
' Empty judgment (W02)
  If W02. UGECG907.FACTCD <> "" Then
' Duplicate from W02
    W03.UGECG907.FACTCD = W02.UGECG907.FACTCD
  EnD If
EnD Sub
```

The meaning of these codes is as follows: First, the data code 'factory code' that belongs to Conversion Value Standard Ledger Management Screen (UGECG907) identified by Definitive Identifier 'UGECG907' and that was input via data field identified by the Word Identifier 'FACTCD,' is checked by W02' s Homogeneity Vector in terms of its attribute and is existing in the data field on the main memory identified by 'W02.UGECG907.FACTCD' .

On this reason, then, this input data code is checked by the logic of 'Empty Judgment (W02)' as to its presence, and if the checking result is 'TRUE' , it is duplicated into the data field on the main memory identified by 'W03.UGECG907.FACTCD' by the logic of 'Duplicate from W02'

When the data code was not input via the data field belonging to Conversion Value Standard Ledger Management Screen (UGECG907) identified by Definitive Identifier 'UGECG907' (for example, all fields of the contents of Conversion Value Standard Ledger), its presence is checked by the logic 'Empty Judgment (W02)' and the checking result becomes 'FALSE' , so the logic of 'Duplicate from W02' does not operate. Therefore, the data field on the main memory identified by 'W03.UGECG907.i' remains in the state of 'Empty' .

Also, for example, the 'data field' concerned with 'confirm' which was clarified in the image diagram in the medium format of Conversion Value Standard Ledger Management Screen (UGECG907) has been determined as 'Direction Command' of Type Attribute' by the identifier 'QURYCM', so codes 'Y3(UGECG907,i) concerned with Independent Variable 'i' of W03 Pallet Function can be univocally determined as follows, by using Visual Basic programming language, based on the various points of Tense Control Vector:

```
' W03 Duplication Vector of Word 'confirm (QURYCM)'
  Private Sub Y3_UGECG907_QURYCM ()
' Empty judgment (W02)
  If W02. UGECG907. QURYCM = True Then
' Duplicate from W02
      W03. UGECG907. QURYCM = W02.UGECG907. QURYCM
    EnD If
  EnD Sub
```

That is, the point different from Word 'factory' is as follows: The ' Type Attribute' of Word 'factory' is 'text' of figures and the 'Empty Judgment (W02)' logic is univocally determined and becomes 'If W02.UGECG907.FACTCD <> ""' in Visual Basic programming language. In contrast, the ' Type Attribute' of Word 'confirm' is 'Directive', so the '' Empty Judgment (W02)' logic is univocally determined and becomes 'If W02.UGECG907.QURYCM = True' .

Next, by recalling the codes of 'L3(UGECG9O7,i)' concerned with the independent variable ''i' of W03 Pallet Function and its operating contents, the Word Identifier, which is an independent variable, and the ' Type Attribute' and ' Input/Output Attribute' of the data field identified by the Word Identifier shall be substituted for determination.

For example, the 'data field' concerned with 'factory' which was clarified in the image diagram in the medium format of Conversion Value Standard Ledger Management Screen (UGECG907) has been determined as identifier 'FACTCD' , so codes 'L3(UGECG907,i) concerned with Independent Variable 'i' of W03 Pallet Function can be univocally determined as follows, by using Visual Basic programming language, based on the various points of Tense Control Vector:

```
  ' W03 Homogeneity Vector of Word 'factory (FACTCD)'
  Private Sub L3_UGECG907_FACTCD ()
  ' Empty judgment (W03)
    If W03. UGECG907.FACTCD <> "" Then
      Exit Sub
    EnD If
  ' Self Creation (i.e., auto-generation)
    W03. UGECG907.FACTCD = W02_UGECG907.FACTCD
    'Acceptance Judgment
  If W03. UGECG907.FACTCD <> "" Then
      Exit Sub
  EnD If
  ' Adding the number of the times of Restart
  W03_UGECG907.FACTCD_CNT = W03_UGECG907.FACTCD_CNT + 1
  ' Restart
  If W03_UGECG907.FACTCD_CNT < W03_RECALL_MAX Then
  ' Restart Flag Set
      W03_RECALL_FLG = True
  EnD If
  ' Refusal
  If W03_UGECG907.FACTCD_CNT >= W03_RECALL_MAX Then
  ' Refusal Flag Set
      W03_UGECG907.FACTCD_Non = True
```

```
  EnD If
 EnD Sub
```

The meaning of these codes is as follows: When data code input by Duplication Vector has been duplicated into the data field which belongs to Conversion Value Standard Ledger Management Screen (UGECG907) identified by Definitive Identifier 'UGECG907' and which is identified by 'W03.UGECG907.FACTCD on the main memory concerned with the data field identified by the Word Identifier 'FACTCD' , its presence is checked by the logic of 'Empty Judgment (W03)' , and the checking result becomes 'TRUE' (that is, it has been Reduced into 'Consciousness Unit-Link' in which 'the Kuh' is established), so the process ends as it is.

On the other hand, when the checking result became 'FALSE' even though the 'Input/Output Attribute' is 'Input' , the duplication is implemented from the input data field on the main memory identified by 'W02.UGECG907.FACTCD' to the self data field on the main memory identified by 'W03.UGECG907.FACTCD' , in accordance with the logic of the principle of 'Self Creation' based on the nature of 'Input Attribute'

In he input data field on the main memory identified by 'W02.UGECG907.FACTCD' , however, data code was not input, so it always becomes FALSE' by the next check logic of 'Acceptance Judgment'.

That is, it means to violate the nature of the ' Input/Output Attribute' being 'Input Attribute' , so the 'Restart' check eventually becomes 'FALSE', thereby setting Refusal Flag. This 'Refusal' phenomenon is reported as a message to Screen via W04 Homogeneity Vector and Message Related Action Vector.

Further, it is recalled that the response to this event set by 'Refusal Flag' is inevitably different from the response of no 'Refusal' case, so the 'Routing Action vector' that rules the phenomenon shall be mounted on W03 Pallet. Thereupon, in order to realize the 'Restart Chain' , the 'W04 Pallet' box (block 11003) concerned with the self Screen and the 'W03 Pallet' boxes (block 11101 to 11111) are newly connected (11113 to 11123, and 11227).

For example, codes 'Routing Action Vector' , which rules 'Restart Chain' corresponding to the 'Refusal Flag' set status on the extension of W3 Pallet that was branched by the 'confirm' Direction Command, is univocally defined as follows, if its operator is 'UGECG907_QURYCM_NGRT' :

```
' "Restart Chain W03 Routing Action Vector corresponding to
  'Refusal' of ' confirm (QURYCM)'
Private Sub P3_ME_UGECG907_QURYCM_NGRT()
' Execute Judgment
  If W03_ ME_UGECG907_QURYCM_NGRT_FLG <> ""
AnD W02.UGECG907.QURYCM = False
      AnD ##### Then
      Exit Sub
  EnD If ' Execute
' Route Setting
  CTRL.NxtScnID = ScrID_******
  CTRL.NxtPlt ID = PltID_******
  CTRL.Continue = ****
  W03_ME_UGECG907_QURYCM_OKRT_FLG = " 1"
' Acceptance Judgment
  If W03_ME_UGECG907_QURYCM_OKRT_FLG = " 1" Then
      Exit Sub
  Enk
Enk Sub
```

The requirements to realize the corresponding process concretely are as follows:

- Determination of Word which detects Refusal (corresponding to the above codes #####.)
- Determination of a method of screen display of Refusal and the Screen (corresponding to the above codes *****.) These are drawn out at the next scrutinizing stage (i.e., at the stage of work for solving Functions of Duplication Vector, Homogeneity Vector and Action Vector) , based on the various points of Scenario Function.

Also, for example, when a data code, via the data field belonging to Conversion Value Standard Ledger Management Screen which is identified by Definitive Identifier (UGECG907), has an attribute exclusively for input (for example, all the fields of the contents of the Conversion Value Standard Ledger), for example, when it was determined that the name of Word is ' Manufacturing Costs Intensified Standard Value ' and that its Word Identifier is 'MKELVL' codes 'L3(UGECG907,i) concerned with Independent Variable 'i' of W03 Pallet Function can be univocally determined as follows, by using Visual Basic programming language, based on the various points of Tense Control Vector:

```
' W03 Homogeneity Vector of Word of 'factory (FACTCD)'
Private Sub L3_UGECG907_MKELVL ()
```

```
' Empty Judgment (W03)
  If W03.UGECG907.MKELVL <> W03. UGECG907.MKELVL Then
      Exit Sub
  EnD If
' Self Creation
  W03.UGECG907.MKELVL = WFL_UGECG907.MKELVL
' Acceptance Judgment
  If W03.UGECG907.MKELVL <> "" Then
      Exit Sub
  EnD If
' Adding the number of the times of Restart
  W03_UGECG907.MKELVL_CNT = W03_UGECG907.MKELVL_CNT + 1
' Restart
  If W03_UGECG907.MKELVL_CNT < W03_RECALL_MAX Then
' Restart Flag Set
      W03_RECALL_FLG = True
  EnD If
' Refusal
  If W03_UGECG907.MKELVL_CNT> W03_RECALL_MAX Then
' Refusal Flag Set
    W03.UGECG907.MKELVL_Non = True
  EnD If
  EnD Sub
```

The meaning of these codes is as follows: Regardless of the status of the data field which belongs to Conversion Value Standard Ledger Management Screen that is identified by Definitive Identifier (UGECG907) and that is identified by 'W03.UGECG907.MKELV' on the main memory concerned with the data field that is identified by Word Identifier 'MKELVL', the duplication is implemented from the File READ data field on the main memory identified by 'WFL.UGECG907.MKELV' which is a principle logic of 'Self Creation' based on the nature of 'Output Attribute' to the self data field on the main memory identified by 'W03.UGECG907.MKELV' .

Hereupon, the File READ data field on the main memory identified by 'WFL.UGECG907*.MKELV' means File UGECG907* called 'Synchronous Data Structure' possessing data record composed of the data field MKELV, the same as the data field MKELV belonging to the self Screen UGECG907 and the data field to memorize data code of Words belonging to DB.

In this example case, those kinds of File and DB are placed under the management of processing apparatus called 'Server' , so in a practical sense, the data field received by the 'Commnd Action Vector ' of ' Message Send/Receive ' is identified by 'WFL.UGECG907*.MKELV' .

For example, codes 'Directive Action Vector' whose name is 'Message Receive' and whose action is 'DEN_RCV' has been determined as follows:

```
Private Sub P3_DEN_RCV()
' Execute Judgment
  If W03_DEN_RCV_FLG = "" AnD W02.UGECG907.QURYCM =
True Then
' Receive from MVS
      Result = HostMVSGetSeg(hr,WFL.UGECG907*,1000)
' Acceptance Judgment
      If hr.RetVal = QueEOF Then
      W03.DEN_RCV_FLG = "1"
      Exit Sub
    EnD If
' Refusal Judgment
      If hr.RetVal <> 0 Then
        W03.DEN_RCV_Non = True
        Result = HostMVSClose(hr)
        Exit Sub
      EnD If
  EnD If
EnD Sub
```

Further, in the various points of the principle theoretical base of 'Self Creation' , the creation of the data code is only allowed based on the operation (algebraic operation or logical operation) except for the substitution from 'WFL. UGECG907*.MKELV' . Accordingly, this Self Creation logic, the methods of Self Creation is determined after confirming with the party requiring software production.

Hereupon, the data field which becomes a base for producing into the self data field is called 'Given Word' , and if the Given Word cannot be clarified at the current moment, the Given Word must be newly accommodated as a word belonging to the medium which realizes Synchronous Data Structure. However, the Given Word which generates self data code by operation can satisfy the various points by limiting it to the words accommodated in W03 Pallet.

For example, with the Self Creation of the data field of 'Conversion Value Standard' s Registration/Modify/Delete' concerned with the 'Conversion Value Standard Ledger Management Screen' , two words of "'select' 'it' " shall become as Given, and the 'it' means what was selected from the specific 'line' displayed among plural lines as all of the contents of the Conversion Value Standard Ledger'

However, the word 'line' has not been clarified in the image diagram. Likewise, in the process so as to satisfy the principle theoretical base of the W03 Homogeneity Vector' s Self Creation, it is determined, with a principle but not with arbitrariness, that a word of 'line number' must be newly accommodated in the data field ' all Conversion Value Standard Ledger' concerned with the Conversion Value Standard Ledger Management Screen. That is, the uncertainty which was latent in the software production requirement composed of words transmitted clearly by the party requiring software production shall be gradually minimized not by personal arbitrariness but with a principle.

Next, when there are plural Given Words (7702), the accommodation of 'Work Requirement Action Vector' is inevitably necessitated. This is because, in a logic of Acceptance Judgment' next to the W03 Homogeneity Vector ' s Self Creation, the check is only implemented on the presence of data code in the Self Creation Self. So, if a check on the concrete contents of data code is proposed as a requirement by the party requiring software production, the countermeasure for the requirement cannot be satisfied. Likewise, the uncertainty of the requirement which was latent in the software production requirement composed of words transmitted clearly can be gradually eliminated.

Further, by finishing solving W03 Pallet Function, the Homogeneity Map is completed, but at this point, the necessity of 'Structural Adjustment Action Vector of File Related Refusal Flag Reset' and 'Structural Adjustment Action Vector of File Related Data Field Empty' must be scrutinized, which were kept pending during solving W04 Pallet Function at the beginning of the solution of Scenario Function.

In this example case, it was understood that medium of File is accommodated in 'Server' , but in this invention, if the Words belonging to the medium are such internal words that cannot be recognized by humans visually and directly, they are treated as a concept equivalent to File and Message (MSG). As a result, it becomes necessary to accommodate both 'Structural Adjustment Action Vector of File Related Refusal Flag Reset' and 'Structural Adjustment Action Vector of File Related Data Field Empty' . A series of codes of the Structural Adjustment Action Vector of File Related Data Field Empty' , for example, becomes as follows:

```
Private Sub P4_ME_PCR1()
' Execute Judgment
  If W04_ME_PCR1_FLG = "" Then
' Execute
' === DB Word Area Clear
    W03.UGECG907*.FACTVD = ""
  W03.UGECG907*.MKELV = ""
  ** The same for the other words**
  EnD If
EnD Sub
Private Sub P4_ME_PCR2()
' Execute Judgment
  If W04_ME_PCR2_FLG = "" Then
' Execute
' Receive MSG Word Refusal Flag <Non>
    W03.UGECG907*RD.FACTVD_Non = False
  W03.UGECG907*RD.MKELV_Non = False
  ** The same for the other words**
' Send MSG Word Refusal Flag <Non>
    W03.UGECG907*SD.FACTVD_Non = False
W03.UGECG907*SD.MKELV_Non = False
** The same for the other words**
  EnD If
EnD Sub
```

As aforementioned, the Homogeneity Map for the processing apparatus controlling the Conversion Value Standard Ledger Management Screen is completed by solving Scenario Function T0.

Based on the premise of the various points of Scenario Function and by solving it so as to satisfy the various points, not only the Homogeneity Map is completed but the program composed of codes and the requirement composed of natural language shall also be determined concurrently by the principle theoretical base, and not personally.

Next, the Homogeneity Map in 'Server' is created.

Upon creation of the Homogeneity Map in ' Server ' , the 'Synchronous Data Structure' is determined.

That is, against the data structure of the 'Receive Screen as a receiving function object' and 'Send Screen as a sending function object' concerned with the various points of Pallet Chain Function, the nature which determines 'Collective Logical Record' and 'Factor Logical Record' (the nature of input attribute or output attribute, singular or plural) is queried to the party requiring software production, and thereafter the related journal is prepared as shown in Fig. 113.

For example, the word 'factory' (11301) is of 'Input Attribute' , and can be grasped as what 'appoints one from among those existing in the plural number' (11303) as well as is of a nature of 'output of input data code as it is' (11305) against the Send Screen.

Also, the 'Contents of 'Conversion Value Standard Ledger' (11307) is of 'Output Attribute' (11309, and can be grasped as being of a nature of 'output of all the conversion codes of the appointed factory from among those existing in the plural number per conversion code and regarding factory-wise and the factory' (11311). Further, the 'Company General Standard' (11313) is of 'Output Attribute' (11315) and can be grasped as being of a nature of 'output of all the patterns from among those existing in the plural number as company' s general consensus and pattern·wise' (11317 and 11319).

Further, for example, the ' Conversion Value Standard Register/Modify/Delete' (11321) is of 'Input Attribute' (11323) and can be grasped as being of a nature of 'appoint specific conversion code of the appointed factory' . (11323).

Next, from the result of preparing the journal against 'Receive Screen' and 'Send Screen' , the 'Type' of the 'Logical Record' shall be determined according to the various points of 'Synchronous Data Structure' based on the rule of Scenario Function.

Fig. 114 is a diagram for explaining the method to determine in accordance with the various points of 'Synchronous Data Structure'.

For example, the Word 'factory' (11401) is of 'Input Attribute' (11402), but it is not an object of 'Register/Modigy/Delete' (11403), so it can be determined as 'β-Type (reference)' (11405).

Further, for example, the Word 'Contents of Conversion Value Standard Ledger 11407' (11307) is of 'Output Attribute' (11409) and is also an object of 'Register/Modify/Delete' (11413), so it can be determined as 'DB-Type (reference, modigy, delete) (11413).

Also, for example, the Word 'Company' s General Standard value' (11415) is of 'Output Attribute' 11417, and it is not an object of 'Register/Modigy/Delete' (11419), so it can be determined as 'β-Type (reference)' (11421).

Next, from the result of the preparation of journal of the Logical Record' s 'Type' , the necessity of the 'Collective Logical Record' and 'Factor Logical Record' is scrutinized per 'Type,' thus determined as shown in Fig. 115.

First, in the 'β-Type' Logical Record, two kinds are classified, i.e., 'factory' 11501 and 'Company General Standard Value' 11505, and it is scrutinized if these must be collected into ' Collective Logical Record' .

The 'Company General Standard Value' 11505 is a corporate general standard, which is unrelated to 'factory-wise' and has no common words. Thus, the there is no inevitability to make it ' Collective Logical Record. ' Words of ' factory' 11501 and 'Company General Standard Value' 11505 are determined as an individual 'Logical Record' (11507, 11511).

Next, the 'Logical Record' composed of plural words 11503, that is, 'Company General Standard Value' (11505) is scrutinized to be made into 'Factor Logical Record' . That is, concerning Words 'Conversion Code' , 'Cost Classification' , 'Work Classification' , Conversion Classification ' , Management Classification ' , Management Classification Name' , and 'Manufacturing Cost Total Standard Value' , the judgment is made on, for example, whether the administration of the data code of the word' s contents is handled by one entity in the company, or partially by the accounting department with the rest handled by the manufacturing management department.

Thereupon, an inquiry is made to the party requiring software production as to the need of preparing the related 'Factor Logical Record' . As a result of the enquiry, for example, if, as for the 'Manufacturing Costs Total Standard Value' , the manufacturing management department handles it as a supervisor and the other concerns are handled in bundle by the accounting department, two kinds of 'Factor Logical Record' are determined (115127) out of the 'Company General Standard Value' Logical record 11505, i.e., for example, 'Manufacturing Cost Total Standard Ledger' 11513 for the former and, for example, 'Classification Ledger' 11515 for the latter.

Also, the same as for the 'Conversion Value Standard Ledger' 11503, an inquiry is made to the party requiring software production concerning the need of preparing the 'Collective Logical factor' and 'Factor Logical Record' . As a result of the inquiry, for example, if the preparation of 'Factor Logical Record' is not required for the 'Conversion Value Standard Ledger' 11503, but instead, as to the word of 'factory' 11501, the preparation of the ' Collective Logical Record' is desired, they are then determined as 'Collective Logical record' (11519).

By implementing the above mentioned procedures, the 'Synchronous Data Structure' has been drawn out so as to satisfy the rule of Scenario Function.

Further, as to 'factory' 11501 and 'Company General Standard Value' 11505 at this point, they are always treated as 'β-Type (reference)' , but, from system point of view, also as to such Logical Record, the Homogeneity Map treating them as ' α-Type (entry/delete)' and 'γ-Type (change)' is required separately so as to satisfy the rule of Scenario Function.

That is, a new Screen subject to manage ' Company General Standard Value ' 11505 is automatically drawn out, so a Homogeneity Map against it shall be prepared. Likewise, as spiraling up, the uncertain details of the systematizing requirement in the beginning shall be determined by the principle that satisfies the rule of Scenario Function, not by the category of personality. This is the feature of the present invention.

Now, against the ' Definitive Identifier ' determined in the beginning of the development work, the 'Definitive Identifiers' as shown in Fig. 116 have been added.

Explanation of this Fig. is omitted herein because it might be duplicated with the aforementioned.

Next, following the determination of 'Synchronous Data Structure' , Homogeneity Map concerned with 'Server' is prepared.

That is, File α-Type or γ-Type and DB-Type are applied to the variable "f" of the Scenario Function T1

$$T1(f) = \Phi1 (\{\Phi p (r, 2) \{L2(r, i) , P2(r)\}\}$$

$$+ \Phi p (rf, 3) \{L3(r, i), L3(f, i) , P3(j)\}$$

$$+ \{\Phi p (f, 4) \{L4(f, i), L4(f), P4(j) \}\})$$

That is, the Definitive Identifier 'UGECD100' of DB, the name of which is 'Conversion Value Standard Ledger' that was determined during the work for 'Synchronous Data Structure' is substituted. As a result, the Scenario Function becomes as follows:

$$T1(UGECD100) = \Phi1 (\{\Phi p (r, 2) \{L2(r, i) , P2(r) \} \}$$

$$+ \{\Phi p (UGECD100,3) \{L3(r, i), L3(UGECD100, i),$$

$$P3(j)\},$$

$$(+ \{\Phi p (UGECD100, 4) \{L4(UGECD100, i) ,$$

$$L4(UGECD100), P4(j) \}\})$$

In this Scenario Function, the 'Φp (UGECD100, 4) {L4(UGECD100, i) , L4(UGECD100), P4(j) }' part means that W04 Pallet concerned with 'Conversion Value Standard Ledger' (UGECD100) has been determined and its Pallet Identifier was determined as 'UGECD100W04' . The 'L4(UGECD100, i)' part means that it is Homogeneity Vector for every word belonging to the Conversion Value Standard Ledger (UGECD100), and if an identifier of the word is determined and substituted into the Independent Variable "i" , a requirement of Homogeneity Map Vector and a series of codes can be univocally determined.

Also, the 'Φp (UGECD100, 4){}' part means that Pallet Function of W04 Pallet concerned with the Conversion Value Standard Ledger (UGECD100) has been determined and the Pallet Function ' s identifier was determined as 'UGECD100W04' , the same as the Pallet Identifier. The '{}' part is an action to construct all the Homogeneity Vectors for individual words belonging to the Conversion Value Standard Ledger (UGECD100), and means that the result of a set is W04 Pallet.

Based on the result of the above solution, 'W04 Pallet' concerned with the ' Final Object File ' , that is, File purposed as 'Registration', 'Modification' or 'Delete' is inscribed into the uppermost left as a box in accordance with the 'various points for the creation of Homogeneity Map concerned with Scenario Function T1' .

Fig. 117 is a diagram for explaining Homogeneity Map of the 'Conversion Value Standard Ledger Management (UGECD100)' . That is, a box (block 11701) of 'W04 Pallet' concerned with 'UGECD100' is inscribed into the uppermost left.

Next, a medium of 'UGECD100' (11703) is inscribed at the bottom of the box (block 11701) of W04 Pallet concerned with 'Conversion Value Standard Ledger' as its name and 'UGECD100' as its Definitive Identifier, and the connection is made with W04 Pallet' s box (block 11701 by an arrow indicating 'Command Action Vector of 'Registration/Modification/Delete' (11705).

Next, a box (block 11707) ' W02 Pallet ' is inscribed unconditionally to the right of the box (block 11701) 'W04 Pallet' From the 'Definitive Lookup Table' in Fig. 116, file (β-Type or DB Type) to be referred in order to 'registration/modification/delete' the medium of 'UGECD100' (11703) is to be found. As a result, three kinds 'Classification Ledger' (UGECF110), 'Manufacturing Costs Total Standard Value Ledger' (UGECF120) and 'Conversion Value Standard Ledger,' (UGECF100) are found.

Thereupon, as for these three kinds of Files, if the order of the clarified File order to maker reference is self-evident, the first File (UGECD100) is corresponded to the 'W02 Pallet' box (Block 11707) of the right of the 'W04 Pallet' box (block 11701) concerned with 'UGECD100'. If the order is not self-evident, a File 11709 selected in random is corresponded to the 'W02 Pallet' box (block 11707' of the right of the 'W04 Pallet' box (block 11701) concerned with 'UGECD100' .

In this example case, no specific order is self-evident at this point, so the order is temporarily determined at randoms depending upon needs. As a result, the order is temporarily determined, for example, as follows: the 1$^{st}$ as 'Classification Ledger' (UGECF110), the 2$^{nd}$ as 'Manufacturing Costs Total Standard Value Ledger' (UGECF120) and the 3$^{rd}$ as 'Conversion Value Standard Ledger' (UGECF100) then at first, the 1$^{st}$ 'Classification Ledger' (UGECF110) (block 10006) is corresponded to the 'W02 Pallet' box (block 11707)' and connected with ' Classification Ledger' (UGECF110) (11709) with an arrow that indicates 'Reference Command Action Vector'

Then, the scrutiny is made on whether 'Restart Chain' is required or not in the reference of the 1$^{st}$ ' Classification Ledger ' (UGECF110), by comparing with data Structure of Screen. That is, the requirement was as follows: the ' Classification Ledger ' (UGECF110) is a data code that should be displayed into the data field of the 'Company General Standard' of 'Conversion Value Standard Ledger Management Screen' and for example, is displayed in all that can exit. Therefore, it is judged that the operation of 'Restart Chain,' that is, the repetitive operation (that is, restart process) of W02 Pallet, W03 Pallet and W04 Pallet, for every 1 record, until all the records' process ends, is judge to be indispensable.

Thereupon, a 'W03 Pallet' box (block 11713) is inscribed to the right of the 'W02 Pallet' box (block 11707) and connected (11715) with the 'W02 Pallet' box (block 11707).

If the order of File to refers is self-evident, 'Continuous Chain' occurs inevitably. In this case, however, the order of File to refer to is not self-evident. Also, it is expected that data codes of 'Company General Standard' are supposed to be created words on the ' Classification Ledger' with the ones on the 'Manufacturing Costs Total Standard Ledger.' Therefore, 'Continuous Chain' is not prepared.

Next, the scrutiny is made on whether 'Duplicate Chain' is required or not by comparing with the Screen data structure. In the ' Conversion Value Standard Ledger Management Screen ' , information in the three kinds of reference Files exits in duplication, so the 'Duplicate Chain' becomes naturally required. Accordingly, 'Duplicate Chain' (11717 and 11719) is inscribed in the each Basic Structure.

Also, 'Duplex Chain' (11721), 'Command Action Vector against Receive MSG' (11723) and 'Command Action Vector against Send MSG' (11725) are inscribed in the W03 Pallet box based on the principle.

As described above, a Homogeneity Map is completed, and 'Pallet Identifier' , 'Definitive Identifier' , 'Command Action Vector' s Action Operator' , 'Word Identifier of Direction Command or Operation Key' and the other identifiers which were drawn out in due course are inscribed in a document ' Homogeneity Map Information Lookup' as a memorandum, as shown in Fig. 118.

<Creation of Word Table (step 6405)>

For every Pallet inscribed in the created Homogeneity Map the following are inscribed in the corresponding 'Word Table.' 'Word Identifier' which identifies the data field belonging to the medium that is identified by Definitive Identifier, attribute of the data field, and Action Vector' s action operator that was drawn out in the process of making the Homogeneity Map..

For example, as shown by fig. 119 and 120, on Word Table of 'UGECG907W04 Pallet' concerned with the Screen of 'Conversion Value Standard Ledger Management' , the following are determined to be inscribed: 'Word Identifier' and 'attribute' , 'number of digits' , 'input/out attribute' and ' ordering' as to all words that belong to ' Conversion Value Standard Ledger Management ' (UGECG907) and 'Action Operator' as to 'Action Vector.'

Also, for example, as shown by fig. 119 and 120, on Word Table of 'UGECG907W02 Pallet' concerned with the Screen of 'Conversion Value Standard Ledger Management' , the following are determined to be inscribed: concerning ' Word Identifier,' 'attribute,' ' the number of digits,' 'input/out attribute' and 'ordering' as to all words that belong to ' Conversion Value Standard Ledger Management' (UGECG907).

Also, for example, as shown by fig. 119 and 120, on Word Table of 'UGECG907W03 Pallet' concerned with the Screen of 'Conversion Value Standard Ledger Management' , the following are determined to be inscribed: 'Word Identifier,' 'attribute,' number of digits,' 'input/out attribute' and 'ordering' as to all words that belong to 'Conversion Value Standard Ledger Management' (UGECG907), and 'Action Operator' as to 'Action Vector.'

<Creation of Tense Control Vector and Action Vector (step 6407)>

This step is a work to solve 'Scenario Function' by taking determined identifiers (i, j, f or r) as independent variables. As aforementioned, through this work, new 'Definitive Identifier' , 'Word Identifier' and 'Action Operator' shall be drawn out so as to satisfy the rule of Scenario Function. This means that, by solving the Scenario Function concerned with them, the uncertain details of the systematizing requirement in the beginning shall be determined as if in spiral by the principle theoretical base, and not by the category of personality in the traditional method. This is the feature of the present invention.

Now, The Tense Control Vector is classified into two kinds: 'Duplication Vector' and Homogeneity Vector' . As to its 'Word Identifier' belonging to Screen, five kinds, 'W04 Duplication Vector' , 'W04 Homogeneity Vector' , 'W02 Homogeneity Vector' , and 'W03 Duplication Vector' , and ' W03 Homogeneity Vector.' which are all identified by the unit of 'its Definitive Identifier' and 'Word Identifier,' should be created. As to 'Word Identifier' not belonging to medium of Screen, 'W03 Homogeneity Vector' which is in the unit identified by its ' Definitive Identifier ' , 'Word Identifier' and 'Input/Output Attribute,' should be created.

<Creation of W04 Duplication Vector>

The various points of Logical Structure based on the principle theoretical base possessed by 'W04 Duplication Vector' is as shown by Fig. 125.

The 'W04 Duplication Vector' Y4(k, i) is one element consisting of the Scenario Function expressed by the following expression:

$$T0 = \Phi 0\ (+ \{\Phi p\ \{\qquad , L2(k, i) , P2(j)\}\ \}k$$
$$+ \Phi p\{Y3(k, i), L3(k, i) , P3(j), T1(f)\}$$
$$+ \{\Phi p\ \{Y4(k, i) , L4(k, i) , P4(j)\}\}\ k))$$

and it is a function to determine software irrespective of its business operation, its application field, its programming language and its installment environment. Its independent variables are only 'Definitive Identifier' k and 'Word Identifier' i.

A flowchart (125A) shown in Fig. 125 is a logical structure of the function Y4(k,i) of 'W04 Duplication Vector' , and its codes (125B) are a Program Template which represents the function Y4(k,i) of 'W04 Duplication Vector' in Visual Basic, for example.

The 'Y4(k,i)' (12501a) in the flowchart (125A) means it is an identifier which identifies the program part of 'W04 Duplication Vector' that is identified by Word Identifier i which belongs to Definitive Identifier k and duplicates 'Breakup of Event Unit-Link' . That is, this means that the program identifier embodied in codes is also determined only by Word Identifier i which belongs to Definitive Identifier k, the same as in 'Event Unit-Link'

Specifically , Program Identifier composed of codes is determined as 'Private Sub Y4_@%k@_@%i@()' (12501b) of the codes part (125B). That is, in 'Private Sub Y4_@%k@_@%i@()' (12501b), the '@%k@' part is the independent variable part of Definitive Identifier k, and the '@%i@' part is the independent variable part of Word Identifier i, so in case of Word whose name is 'Manufacturing Costs Total Standard Value' and whose Identifier is 'ENTMKELVL', the Word belonging to Screen whose definitive name is 'Conversion Value Standard Ledger Management' and whose Definitive Identifier is 'UGECG907' , the codes become as follows:
@%k@=UGECG907
@%i@= ENTMKELVL
and the Program Identifier is univocally determined as 'Private Sub Y4_UGECG907_ ENTMKELVL()'.

Next, the 'Empty' (step 12503a) is a logic to check if 'semantic quality of Definite Unit-Link' has been induced or not to the data field on W02 Pallet that is identified by Word Identifier i belonging to Definitive Identifier k so as to accomplish 'Synchronization' as semantic quality of Consciousness Unit-Link by revealing itself to Consciousness Unit-Link in which ' the Kuh' is established. Specifically, the 'Empty' logic composed of codes is determined as 'IF W02. @%k@.@%i@ <> "" Then' (12503b) of the codes part.

That. is, *in* 'If W02. @%k@.@%i@ <> "" Then' (12503b), the '@%k@' is the independent variable part of Definitive Identifier k, and the '@%i@' part is the independent variable part of Word Identifier i, so in case of the Word whose name is 'Manufacturing Costs Total Standard Value' and whose Identifier of 'ENTMKELVL', belonging to Screen with its definitive name is Conversion Value Standard Ledger Management' and whose Definitive Identifier is 'UGECG907' , the codes becomes as follows:

@%k@=UGECG907

@%i@= ENTMKELVL

and the ' Empty ' logic is univocally determined as ' IF W02.UGECG907.ENTMKELVL <> "" Then' .

The action of these codes is to check if the presence of a data code is TRUE in the data field identified by 'UGECD907.ENTMKELVL' on W02 Pallet.

Next, the 'Duplication' (step 12505a) is a logic to succeed the 'semantic quality of Definite Unit-Link' to Event Unit-Link by 'Association' and 'Breakup,' if the ' semantic quality of Definite Unit-Link' has already been induced to the data field on W02 Pallet identified by Word Identifier i belonging to Definitive Identifier k, subject to accomplishing 'Synchronization' as a semantic quality of Consciousness Unit-Link, thereby Revealing it to Consciousness Unit-Link in which 'the Kuh' is accomplished. Specifically, a 'Duplication' logic composed of a series of codes is determined as the codes 'W04.@%k@.@%i@ = W02.@%k@.@%i@' (12505b).

That is, in 'W04.@%k@.@%i@ = W02.@%k@.@%i@' (12505b), the '@%k@' part is the Independent Variable part of Definitive Identifier k, and the '@%i@' part is the Independent Variable part of Word Identifier i, so in case of Word whose name is 'Manufacturing Costs Total Standard Value' and whose Identifier is 'ENTMKELVL', the Word belonging to the Screen whose definitive name is ' Conversion Value Standard Ledger Management' and whose Definitive Identifier is 'UGECG907' , the codes become as follows: @%k@=UGECG907.@%i@= ENTMKELVL and the ' Duplication ' logic is univocally determined as 'W04.UGECG907. ENTMKELVL = W02. UGECG907.ENTMKELVL' .

The action of these codes is to duplicate a data code existent in the data field identified by 'UGECG907.ENTMKELVL' on W02 Pallet into the data field identified by UGECG907.ENTMKELVL' on W04 Pallet.

Next, a logic of 'Empty' (step 12507a) is explained. If 'semantic quality of Definite Unit-Link' has not been induced to the data field on W02 Pallet identified by Word Identifier i belonging to Definitive Identifier k, with the intention to accomplish 'Synchronization' as a semantic quality of Consciousness Unit-Link, thereby Revealing it to Consciousness Unit-Link in which 'the Kuh' is established, Definite Unit-Link will always materialize, and on its extension the Revelation to Consciousness Unit-Link in which 'the Kuh' is accomplished will also materialize. Event Unit-Link can induce 'semantic quality of Consciousness Unit-Link' by the action of 'Association' as the inevitability of the Providence of Existence, but, since the simulation of 'Reduction' of the Providence of Existence into the computer space was humanly made it cannot be said that it is always inevitably induced.

For this reason, an assurance check must be implemented to find if the semantic quality of Consciousness Unit-Link in which 'the Kuh' is established has been induced or not. A logic for this purpose is the 'Empty' (step 12507a) then, the same as in 'Empty' (step 12503a), it becomes a logic with a meaning of checking if 'semantic quality of Consciousness Unit-Link' in which ' the Kuh ' is accomplished has been induced by Event Unit-Link to the data field 12509 on W03 Pallet identified by Word Identifier i belonging to Definitive Identifier k. Specifically, the 'Empty' logic composed of codes is determined as 'IF W03.@%k@.@%i@ <> "" Then' (12507b) is the codes part.

That is, in 'IF W03.@%k@.@%i@ <> "" Then' (12507b), the '@%k@ is the Independent Variable part of Definitive Identifier k, and the '@%i@' is the Independent Variable part of Word Identifier i, so in case of the Word whose name is 'Manufacturing Costs Total Standard Value' and whose Identifier is 'ENTMKELVL' , the Word belonging to the Screen whose definitive name is ' Conversion Value Standard Ledger Management' and whose Definitive Identifier is 'UGECG907' , the codes become as follows:

@%k@=UGECG907,

@%i@= ENTMKELVL

and the ' Empty ' logic is univocally determined as ' IF W03.UGECG907.ENTMKELVL <> "" Then' .

The action of these codes is to implement checking if data code is existent in the data field identified by 'UGECG907.ENTMKELVL' on W03 Pallet.

Next, if semantic quality of Consciousness Unit-Link in which 'the Kuh' is accomplished has been induced to the data field 12509 on W03 Pallet identified by Word Identifier i belonging to Definitive Identifier k, the 'Duplication' (step 12511a) is a logic to succeed it to Event Unit-Link by 'Breakup.' Specifically, a Duplication logic composed of codes is determined as 'W04. @%k@.@%i@ = W03. @%k@.@%i@' (12511b).

That is, in ' 'W04.@%k@.@%i@ = W03.@%k@.@%i@' (12511b). the '@%k@' is the Independent Variable part of Definitive Identifier k, and the '@%i@' is the Independent Variable part of Word Identifier i, so in case of the Word whose name is 'Manufacturing Costs Total Standard Value' and whose Identifier is 'ENTMKELVL' , the Word belonging to the Screen whose definitive name is ' Conversion Value Standard Ledger Management' and whose Definitive Identifier is 'UGECG907' , the codes become as follows:

@%k@=UGECG907,

@%i@= ENTMKELVL and the ' Duplication ' logic is univocally determined as ' W04.UGECG907.ENTMKELVL = W03.UGECG907.ENTMKELVL' .

The action of these codes is to duplicate a data code existent in the data field 12509 identified by 'UGECG907.ENTMKELVL' on W03 Pallet into the data field identified by 'UGECG907.ENTMKELVL' on W04 Pallet.

Further to add, in cases of 'Duplication' (step 12505a) End (step 12515a), 'Duplication' (step 12511a) End (step 12517a), and 'Empty' (step 12507a) being 'False' (12519a), then the processes are terminated as in 'Exit Sub' (respectively, 12515b, 12517b, 12519b) so as not to enable to induce the univocal semantic quality alone attached to the word identified by Definitive Identifier k and Word Identifier i, because the premise of the Providence of Existence based on the present invention lies in the entity of the univocal 'semantic quality'.

<W04 Homogeneity Vector>

The various points of Logical Structure possessed by 'W04 Homogeneity Vector' based on the principle theory is as shown in Fig. 126, as aforementioned.

The 'W04 Homogeneity Vector' L4(k,i) is one component consisting of the 'Scenario Function,' which is represented by the following expression:

$$T0 = \Phi 0\ (+\{\Phi p\ \{\quad , L2(k,i)\ , P2(j)\}\ )k$$

$$+\ \Phi p\ \{Y3(k,i)\ , L3(k,i)\ , P3(j)\ , T1(f)\}$$

$$+\{\Phi p\ \{Y4(k,i)\ , L4(k,i)\ , P4(j)\}\}\ k))$$

and it is a function to determine a software irrespective of its business operation, its application field, programming language and its installment environment, and its independent variables are only 'Definitive Identifier' k and 'Word Identifier' i.

A flowchart (126A) shown in Fig. 126 is a logical structure of the function L4(k,i) of 'W04 Homogeneity Vector' , and a series of codes (126B) are a Program Template which represents the function L4(k,i) of 'W04 Homogeneity Vector' in Visual Basic, for example.

The 'L4(k,i)' (12601a) in the flowchart (126A) means it is Program Identifier which identifies the program part of 'W04 Homogeneity Vector' that simulates 'Equivalent Unit-Link' ruling an action of 'Event Unit-Link Regulation and Coupling' , which is identified by Word Identifier i belonging to Definitive Identifier k. That is, it means that the program identifier embodied in codes is also determined only by Definitive Identifier k and Word Identifier i belonging to it, the same as in 'Event Unit-Link'

Specifically, Program Identifier composed of a series of codes is determined as 'Private Sub L4_@%k@_@%i@()' (12601b) in the codes part (126B).

That is, in 'Private Sub L4_@%k@_@%i@()' (12601b), the '@%k@' part is the independent variable part of Definitive Identifier k, and the '@%i@' is the independent variable part of the Word Identifier i, so in case of Word whose name is 'Manufacturing Costs Total Standard Value' and whose Identifier is 'ENTMKELVL' , the Word belonging to the Screen whose definitive name is ' Conversion Value Standard Ledger Management' and whose Definitive Identifier is 'UGECG907', the codes become as follows:
@%k@=UGECG907
@%i@= ENTMKELVL
and the Program Identifier is univocally determined as 'Private Sub L4_UGECG907_ENTMKELVL()' .

Next, the 'Empty' (step 12603a) is a logic to check if 'semantic quality of Definite Unit-Link' which was inherited by the Breakup of Event Unit-Link into the data field 12513 on W04 Pallet identified by Word Identifier i belonging to Definitive Identifier k is existent or not. If 'Event Unit-Link' based on the Providence of Existence materializes, 'Equivalent Unit-Link' shall materialize inevitably with no condition.

Thereupon, concretely, an 'Empty' logic composed of codes is determined by the $2^{nd}$ 'Empty' box, 'IF W04.@%k@.@%i@ <> W04.@%k@.@%i@ Then' (12603b) is the codes part 126B.

That is, in ' IF W04.@%k@.@%i@ <> W04.@%k@.@%i@ Then ' (12603b), the '@%k@' is the independent variable part of Definitive Identifier k, and the '@%i@' is the independent variable part of Word Identifier i, so in case of the Word whose name is 'Manufacturing Costs Total Standard Value' and whose Identifier is 'ENTMKELVL' , the Word belonging to the Screen whose definitive name is 'Conversion Value Standard Ledger Management' and whose Definitive Identifier is 'UGECG907', the codes become as follows:
@%k@=UGECG907
@%i@= ENTMKELVL
and the ' Empty ' logic is univocally determined as ' IF W04.UGECG907.ENTMKELVL <> W04.UGECG907.ENTMKELVL Then'. The action of these codes is to proceed unconditionally to the next 'Embodiment Edit' 12605a.

Next, the 'Embodiment Edit' (step 12605a) is a logic of Equivalent Unit-Link that embodies Consciousness Unit-Link's semantic quality, which was succeeded by the Breakup of Event Unit-Link into the data field 12513 on W04 Pallet identified by Word Identifier i belonging to Definitive Identifier k, as Natural Unit-Link through 'Regulation' and ' Coupling' . Specifically, the ' Embodiment Edit' logic composed of codes is determined by the logic, for example, which is attaches the '¥' symbol to the heading of data code of the codes part 126B, namely, 'W04.@%k@.@%i@ = ¥ + W03. @%k@.@%i@ Then'' (12605b).

That is, in the 'W04.@%k@.@%i@ = ¥ + W03.@%k@.@%i@ Then' (12605b), the '@%k@' is an Independent Variable part of Definitive Identifier k, and the '@%i@' is an Independent Variable part of Word Identifier i, so in case of the Word whose name is 'Manufacturing Costs Total Standard Value' and whose Identifier is 'ENTMKELVL', the Word belonging to the Screen whose Definitive name is 'Manufacturing Costs Total Standard Value Ledger' and whose Definitive Identifier' is UGECG907, these two parts become as follows:

@%k@=UGECG907

@%i@=ENTMKLVL,

and the 'Embodiment Edit' logic is univocally determined as W04. UGECG907.ENTMKLVL = ¥ + W03. UGECG907.ENTMKLVL Then' . The action of these codes is to add '¥' symbol to the head of the data code existing in the data field on W04 Pallet identified by 'UGECG907.ENTMKLVL' .

Next, 'Acceptance' (step 12607a) is a logic to check on the presence of data code introduced by 'Embodiment Edit' in the data field on W04 Pallet W04 Pallet identified by Word Identifier i belonging to Definitive Identifier k. Spedifically, the 'Acceptance' logic is determined, which is composed of the codes 'IF W04. @%k@.@%i@ <> " " Then' (12607b) in the codes part 126B.

That is, in the 'IF W04. @%k@.@%i@ <> " " Then' (12607b), the '@%k@' is an Independent Variable part of Definitive Identifier k, and the '@%i@' is an Independent Variable part of Word Identifier i, so in case of the Word whose name is 'Manufacturing Costs Total Standard Value' and whose Identifier is 'ENTMKELVL', the Word belonging to the Screen whose Definitive name is 'Manufacturing Costs Total Standard Value Ledger' and whose Definitive Identifier' is UGECG907,' these two parts become as follows:

@%k@ = UGECG907

@%i@ = ENTMKELVL,

and the 'Duplication' logic is univocally determined as 'IF W04.UGECG907. ENTMKELVL <> " " Then' .

The action of these codes is, if data code is present in the field on W04 Pallet identified by 'UGECG907.ENTMKLVL', the process proceeds to END (Exit Sub).

The next 'W02orW03' (step 12609a) is a logic to check on the presence of 'Refusal Flag' on the data field on W02 Pallet identified by the 'NON' identifier meaning Refusal concerned with Word Identifier i that belongs to Definitive Identifier k and on the data field on W03 Pallet. Specifically, the ' W02orW03 ' logic is determined, which is composed of the codes 'IF W02.@%13@.@33@ Non} = True Then' (12609b) and " IF W03.@%13@.@33@ Non} = True Then' (12610b) in the codes part.

That is, in the, 'IF W02.@%13@.@33@ Non} = True Then' (12609b) and " IF W03.@%13@.@33@ Non} = True Then' (12610b), the '@%k@' is an Independent Variable part of Definitive Identifier k, and the '@%i@' is an Independent Variable part of Word Identifier i, so in case of the Word whose name is ' Manufacturing Costs Total Standard Value' and whose Identifier is 'ENTMKELVL' , the Word belonging to the Screen whose Definitive name is 'Manufacturing Costs Total Standard Value Ledger' and Definitive Identifier' is UGECG907, 'these two parts become as follows:

@%k@=UGECG907

@%i@=ENTMKELVL,

and the "W02orW03' logic is univocally determined as 'IF W02. UGECG907.ENTMKLVL_Non = True Then ' and " IF W03.UGECG907.ENTMKLVL = True Then' .

The action of these codes is to check on the presence of "Refusal Flag' in the data fields on W02 Pallet and W03 Pallet which are identified by the identifier 'NON' that means Refusal concerned with Word Identifier i belonging to Definitive Identifier k.

Next, the 'Refusal Embodiment' (step 12611a) and 'Refusal Embodiment' (step 12613a) are a logic to set a cause of Refusal into a table when "Refusal Flag" concerned with the Word on W02 and W03 Pallets exists in the data field on the ' Message Table' identified by Word Identifier i belonging to Definitive Identifier k. Specifically, the 'Refusal Embodiment' logic is determined, which is composed of the codes 'TBL_MSGNO(W02 @%13@ @%33@}) = $MSG' (12611b) and 'TBL_MSGNO(W03 @%13@ @%33@}) = $MSG' (12613b) in the codes part..

That is, in the 'TBL_MSGNO(W02 @%13@ @%33@}) = $MSG' (12611b) and 'TBL_MSGNO(W03 @%13@ @%33@}) = $MSG' (12613b), the '@%k@' is an Independent Variable part of Definitive Identifier k, and the '@%i@' is an Independent Variable part of Word Identifier i, so in case of the Word whose name is 'Manufacturing Costs Total Standard Value' and whose Identifier is 'ENTMKELVL', the Word belonging to the Screen whose Definitive name is 'Manufacturing Costs Total Standard Value Ledger' and whose Definitive Identifier' UGECG907,' these two parts become as follows:
@%k@=UGECG907
@%i@=ENTMKELVL,
and the 'Refusal Embodiment' logic is univocally determined as 'TBL_MSGNO(W02_ UGECG907_ENTMKLVL = $MSG' and 'TBL_MSGNO (W03_UGECG907_ ENTMKLVL) =$MSG'.

The action of these codes is to set a cause of Refusal '$MSG' into the data field on the 'Massage Table' identified by Word Identifier i belonging to Definitive Identifier k.

Through the operation of the logic of ''Duplication Vector' and 'Homogeneity Vector' mounted on W04 Pallet, the data code input via medium Screen or the data code produced in W03 Pallet shall be edited and embodied, thereby actualizing for every Word via medium Screen.

<W04 Action Vector>

In addition to these Tense Control Vectors, 'Message Table' handling ' Action Vector,' ' Routing Action Vector, ' and ' Structural Adjustment Action Vector' which handles 'Refusal Flag,' are mounted on W04 Pallet.

Various points of the logical structure based on the principle base possessed by W04 Action vector is as shown in Fig. 127, as already mentioned.

The 'W04 Action Vector' P4(j) is one element constituting Scenario Function shown by the following expression;

$$T0 = \Phi 0 \, (+ \{\Phi p \{ \qquad , L2(k, i) , P2(j)\} \}k$$

$$+ \Phi p \{ Y3(k, i) , L3(k, i) , P3(j), T1(f)\}$$

$$+ \{\Phi p \{Y4(k, i) , L4(k, i) , P4(j)\}\} k)$$

and, it is a function which determines a software, regardless of its business operation, its applications, its programming languages, and its installment environment. Its Independent Variable is only an Action Operator j.

The flowchart part (127A) shown in Fig. 127 means it is a Program Identifier which identifies a program part of W04 Action Vector that is identified by Action Operator j belonging to Definitive Identifier M. That is, it is meant that the Program Identifier which materializes in codes is determined only by 'Action Operator' j. Specifically, the Program Identifier composed of codes is determined as 'Private Sub P4 @%M@ @%j@()}' (12701b) is he codes part.

That is, in the ''Private Sub P4 @%M@ @%j@()}' (12701b), the '@%M@' is an Independent Variable part of Definitive Identifier M, and the '@%j@' is an Independent Variable part of Action Operator j. Hereupon, in case of 'Directive Action vector' , the Definitive Identifier M is univocally determined as 'Definitive Identifier' concerned with 'Logical Record' that identifies medium that is an object to operate.

In case of 'Routing Action vector' , 'Structural Adjustment Action vector' and 'Work requirement Action vector', an identifier 'ME' , for example, which means medium of a main memory, is univocally allocated.

Also, for Action Operator j, as W04 Action Vector, an action of the following kinds are necessitated in principle.

- 'Work Requirement Action Vector' to operate 'Message Table'
- 'Routing Action Vector'
- 'Structural Adjustment Action Vector' to implement an initializing action of 'File-related Refusal Flag' and 'File-related Word' s data field'.

The 'Work Requirement Action Vector' to operate 'Message Table' corresponds to as follows: those which are set by W04 Homogeneity Vector, including 'Action Vector,' which sets into 'Message Table' such 'Refusal Cause' other than the 'Refusal Cause' of the Word identified by Word Identifier i belonging to Definitive Identifier k; 'Action Vector' which selects which 'Refusal Cause' selected from plural 'Refusal Causes' that were set in 'Message Table' must be embodied into the 'Message Field' identified by Word Identifier i belonging to Definitive Identifier k; and 'Action Vector' which sets a message corresponding to the selected 'Refusal Cause' into the 'Message Field' .

The 'Routing Action Vector' corresponds to 'Action Vector' which sets 'Definitive Identifier' identifying medium of Send Screen that will embody and edit the data code, which was embodied and edited in the related W04 Pallet, and Identifier of W02 pallet concerned with Receive Screen after transmission.

The 'Structural Adjustment Action Vector,' which implements an initializing action of 'Refusal Flag' and 'Action Vector Execute Done Flag,' is 'Action Vector' that initializes 'Refusal Flag' set by 'W02 Homogeneity Vector' , 'W03 Homogeneity Vector' , 'W03 Action Vector' and 'W04 Action Vector' , and also initializes a Flag that manages Execute Done of 'W03 Action Vector' and 'W04 Action Vector' .

Accordingly, for example, in case of the 'Action Vector' that selects which 'Refusal Cause' selected from plural 'Refusal Causes' set in 'Message Table' must be embodied into the 'Message Field' identified by Word Identifier i belonging to Definitive Identifier k, the Program Identifier of 'W04 Action Vector' becomes as follows when the Action name is 'Refusal Cause Select' and the Action Operator is 'SELMSG' against a table with a Definitive name 'Message Table' and Definitive Identifier 'TBL_MSGNO' :

@%M@=TBL_MSGNO
@%j@=SELMSG,

and Program Identifier is univocally determined as 'Private Sub P4_TBL=MSGNO_SELMSG()' .

Also, the 'Routing Action Vector' becomes as follows, when the Definitive name univocally becomes 'Main Memory' as well as the Definitive Identifier also univocally becomes 'ME' and the Action name is 'Route Setting' with the Action Operator 'RT1',

@%M@=ME
@%j@=RT1,

and the Program Identifier is univocally determined as 'Private Sub P4_ME_RT1()'.

Also, for example, the 'Structural Adjustment Action Vector' of 'Refusal Flag Initialize' becomes as follows, when the Definitive name becomes 'Main Memory' as well as the Definitive Identifier also becomes 'ME' and the Action name is 'Refusal Flag Initialize' with the Action Operator 'NON_INIT',

@%M@=ME
@%j@=NON_INIT,

and the Program Identifier is univocally determined as ''Private Sub P4_ME_NON_INIT' .

Next, the 'Execute' (step 12703a) is a logic to check if the execution is implemented for W04 Action Vector identified by Action Operator j belonging to Definitive Identifier M. In case of Tense Control Vector, it is implemented based on the 'Empty' logic, but in Action Vector, the logic is to check whether 'Action Vector Execute Done Flag' has been set or not. This is because the Action Vector is a logic produced from the Providence of Existence as a result of reducing the Providence of Existence into the computer space.

That is, in 'IF WFL.@%M@ @%j@ FLG} <> "" Then' (12703b), the '@%M@' is the independent variable part of Definitive Identifier M and the '@%j@' is the independent variable part of Action Operator j, so, for example, the 'Routing Action Vector' with its Definitive Identifier 'ME' determined univocally and its Action Operator 'RT1,' becomes as follows:

@%M@=ME
@%j@=RT1,

and the ' Execute ' logic is univocally determined as ' IF WFL.ME_RT1_FLG <> "" Then' .

The action of these codesis to implement check if a data code is not existent or not in the data field 12705 of Execute Done Flag (FLG) of the 'Routing ACTION Vector' on the 'Work Area (WFL)' identified by Action Operator j belonging to the Main Memory, that is, to implement check if 'Routing Action Vector' has been executed or not.

Further to add, the codes of the 'Execute' (step 12703a) logic contains a check of the following conditions in addition to ' IF WFL.@%M@ @%i@ FLG} <> "" Then' (12703b).

For example, the 'Action Vector' that selects which 'Refusal

Cause' selected from plural 'Refusal Causes' set in 'Message Table' must be embodied into the 'Message Field' identified by Word Identifier i belonging to Definitive Identifier k, is univocally determined as a data code to implement a check satisfying the following conditions:

- the 'Action Vector' , which sets, into the message table, 'Refusal Cause' other than the 'Refusal Causes' of the Word identified by Word Identifier i belonging to Definitive Identifier k set by W04 Homogeneity Vector, has already been executed;

  For example, the ' Action Vector ' that sets a message corresponding to the selected 'Refusal Cause' into the 'Message Field' is univocally determined as a data code to implement a check satisfying the following conditions:
- the 'Action Vector' which sets, into the message table, 'Refusal Cause' other than the 'Refusal Causes' of the Word identified by Word Identifier i belonging to Definitive Identifier k set by W04 Homogeneity Vector, has already been executed; and,
- the 'Action Vector' which selects which 'Refusal Cause' selected from plural 'Refusal Causes' set in 'Message Table' must be embodied into the 'Message Field' identified by Word Identifier i belonging to Definitive Identifier k, has already been executed.

Also, for example, the 'Structural Adjustment Action Vector' is univocally determined as a data code to implement a check satisfying the following conditions:

- the 'Action Vector' which sets, into the message table, 'Refusal Cause' other than the 'Refusal Causes' of the Word identified by Word Identifier i belonging to Definitive Identifier k set by W04 Homogeneity Vector, has already been executed, and;
- the 'Action Vector' which selects which 'Refusal Cause' selected from plural 'Refusal Causes' set in 'Message Table' must be embodied into the 'Message Field' identified by Word Identifier i belonging to Definitive Identifier k, has already been executed; and
- the 'Action Vector' that sets a message corresponding to the selected 'Refusal Cause' into the 'Message Field' has already been executed.

Further, the 'Structural Adjustment Action Vector' to implement an initializing action of 'Refusal Flag' is univocally determined as a data code to implement a check satisfying the following conditions:

- the 'Action Vector' which sets, into the message table, 'Refusal Cause' other than the 'Refusal Causes' of the Word identified by Word Identifier i belonging to Definitive Identifier k that is set by W04 Homogeneity Vector, has already been executed;
- the 'Action Vector,' which selects which 'Refusal Cause' selected from plural 'Refusal Causes' set in 'Message Table' must be embodied into the 'Message Field' identified by Word Identifier i belonging to Definitive Identifier k, has already been executed;
- the 'Action Vector' that sets a message corresponding to the selected 'Refusal Cause' into the 'Message Field' has already been executed; and
- the 'Routing Action Vector' has already been executed.

Also, the 'Structural Adjustment Action Vector' to implement an initializing action of 'Action Vector Execute Done Flag' , is univocally determined as a data code to implement a check satisfying the following conditions:

- the 'Action Vector' which sets, into the message table, 'Refusal Cause' other than the 'Refusal Causes' of the Word identified by Word Identifier i belonging to Definitive Identifier k set by W04 Homogeneity Vector, has already been executed;
- the 'Action Vector,' which selects which 'Refusal Cause' selected from plural 'Refusal Causes' set in 'Message Table' must be embodied into the 'Message Field' identified by Word Identifier i belonging to Definitive Identifier k, has already been executed;
- the 'Action Vector' that sets a message corresponding to the selected 'Refusal Cause' into the 'Message Field' has already been executed, and
- the 'Routing Action Vector' has already been executed; and
- the ' Structural Adjustment Action Vector ' to implement an initializing action of 'Refusal Flag.'

Next, the 'Execute Process' (step 12707a) is a logic to implement W04 Action Vector identified by Action Operator j belonging to Definitive Identifier M. That is, it executes an action purposed by individual 'W04 Action Vectors' .

For example, the 'Action Vector' , which sets into the message table 'Refusal Cause' other than the 'Refusal Causes' of the Word identified by Word Identifier i belonging to Definitive Identifier k, sets, for example, a Refusal Cause corresponding to the 'Refusal Flag' set by W03 Homogeneity Vector of the Word belonging to 'Definitive Identifier that identifies, for example, medium of File other than medium Screen into the message table. Specifically, for example, the Refusal Flag set by W03 Homogeneity Vector of the Word, which belongs to File whose Definitive name is 'Conversion Value Standard Ledger Management ' , and whose Definitive Identifier is ' UGECD100 ' as well as whose word name is ' Manufacturing Costs Total Standard Value' and whose Word Identifier is 'MKELVL' , is univocally determined as below:

```
If W03.UGECD100_MKELVL_NON = True Then
      TBL_MSGNO(W03_UGECD100_MKELVL) = $MSG
   Enk If.
```

In case of the action of reference of File whose its Definitive name is 'Conversion Value Standard Ledger Management' and whose Definitive Identifier is 'UGECD100,' and in case of 'Refusal Flag' set by W03 Action Vector whose action operator is 'REAK,' it is univocally determined as below:

```
   If WFL.UGECD100.REAL_NON = True Then
      TBL_MSGNO(W03_UGECD100_READ) = $MSG
   EnD If.
```

For example, the 'Action Vector' , which selects which 'Refusal Cause' selected from plural 'Refusal Causes' set already in 'Message Table' must be embodied into the 'Message Field' identified by Word Identifier i belonging to Definitive Identifier k, is univocally determined as follows:

```
L = 0
J = 0
Do Until J > TBL_MSGNO_MAX
    OR L <> 0
  J = J + 1
    If TBL_MSGNO(J) <> 0 Then
    L = J
  EnD If
Loop.
```

Also, for example, the 'Routing Action Vector' is an action aiming to set Definitive Identifier that identifies medium of Send Screen that will embody data code embodied and edited in the W04 Pallet and Identifier of W02 Pallet concerned with Receive Screen after transmission. So, for example, in case of a Screen whose Definitive name. is 'Conversion Value Standard Ledger Management' and whose Definitive Identifier is 'UGECG907' in case of the W04 Pallet, it is univocally determined as follows:

```
CTRL. NxtPltID = " UGECG907W02"
CTRL.NxtScnID = " UGECG907" .
```

Also, for example, in case of the 'Structural Adjustment Action Vector' which implements an initializing action of 'Refusal Flag' and 'Action Vector Execute Done Flag' , it is purposed to initialize 'Refusal Flag' and 'Action Vector Execute Done Flag' concerned with all of the mounted Homogeneity Vector and Duplication Vector, so codes are also univocally determined.

As mentioned above, for the Execute Process, ' Action Vector Execute Done Flag' of the self is univocally set after executing a purposed process (step 12707b).

Next, the 'Acceptance Judgment' (step 12709a) is a logic to check if the execution process of W04 Action Vector which is identified by Action Operator j belonging to Definitive Identifier M was accepted or not, and this process becomes a check (12709b) on Already Set of the Self ' s Action Vector Execute Done Flag 'WFL. @%M@_@%Mj@_FLG'. So, it is univocally determined as below:

```
'WFL.@%M@_@%Mj@_FLG = " 1" Then'
```

<W02 Homogeneity Vector>

Various points of the logical structure of the principle base possessed by 'W02 Homogeneity Vector' are as shown in Fig. 128, as already mentioned.

The 'W02 Homogeneity Vector' L2(k,i) is one component consisting of the 'Scenario Function' which is represented by the following expression:

$$T0 = \Phi 0\ (+\{\Phi p\ \{\qquad , L2(k, i)\ , P2(j)\}\ )k$$

$$+\ \Phi p\ \{Y3(k, i)\ , L3(k, i)\ , P3(j)\ , T1(f)\}$$

$$+\{\Phi p\ \{Y4(k, i)\ , L4(k, i)\ , P4(j)\}\}\ k))$$

and it is a function to determine software irrespective of its business operation, its application field, its programming language and its installment environment. Its independent variables are only 'Definitive Identifier' k and 'Word Identifier' i.

A flowchart (128A) shown in Fig. 128 indicates a logical structure of the function L2(k,i) of 'W02 Duplication Vector' , and a series of codes (128A) are a Program Template which represents the function L2(k,i) of W02 Homogeneity Vector expressed in Visual Basic.

The 'L2(k,i)' (12801a) in the flowchart (128A) means it is Program Identifier which identifies the program part of 'W02 Homogeneity Vector' that imitates Definite Unit-Link 1413 which can be Revealed to the Consciousness Unit-Link, where the 'Kuh' is accomplished, to be identified by Word Identifier i belonging to Definitive Identifier k. That is, it means that the Program Identifier embodied in codes is also determined only by the same Definitive Identifier k as that of Equivalent Unit-Link 1419 and Word Identifier i belonging to the Definitive. Specifically, Program Identifier composed of codes is determined as 'Private Sub L2_@%k@_@%i@()' (12801b) in the codes part.

That is, in ' Private Sub L2_@%k@_@%i@()' (12801b), the ' @%k@' is the independent variable part of Definitive Identifier k, and the '@%i@' is the independent variable part of Word Identifier i, so in case of the Word whose name of 'Manufacturing Costs Total Standard Value' and whose Identifier is 'ENTMKELVL', the Word belonging to the Screen whose Definitive name of 'Conversion Value Standard Ledger Management' and whose Definitive Identifier is 'UGECG907' , the codes become as follows:
@%k@=UGECG907
@%i@= ENTMKELVL
and the Program Identifier is univocally determined as 'Private Sub L2_UGECG907_ENTMKELVL()'.

Next, the 'Empty' (step 12803a) is a logic to check if Definite Unit-Link 1413 that can be Revealed to the 'Consciousness Unit-Link, ' where the 'Kuh' is establishe, is existent or not. Specifically, the 'Empty' logic composed of the codes of the 1st 'Empty' of 'IF' W02.@%k@.@%I@} = "" Then' (12803b).

That is, in 'IF W02.@%k@.@%I@} = "" Then' (12803b), the '@%k@' is the independent variable part of Definitive Identifier k, and the '@%i@' is the independent variable part of Word Identifier i, so in case of the Word whose name of 'Manufacturing Costs Total Standard Value' and whose Identifier is 'ENTMKELVL' , the Word belonging to the Screen whose Definitive name is 'Conversion Value Standard Ledger Management' and whose Definitive Identifier is 'UGECG907' , the codes become as follows:
@%k@=UGECG907
@%i@= ENTMKELVL
and the ' Empty ' logic is univocally determined as ' IF W02.UGECG907. ENTMKELVL= "" Then' .

The action of these codes is to check if data code is not existent or not in the data field on W02 Pallet identified by Word Identifier i belonging to Definitive Identifier k.

The reason non-existence of data code is treated as 'Empty' is as follows: The data field was prepared, subject to being identified by Word Identifier i which shall belong to medium of Screen and the Screen that shall be identified by Definitive Identifier k, means that semantic quality of the 'Consciousness Unit-Link, in which the 'Kuh' is accomplished, shall always be induced by W03 Pallet' s Homogeneity Vector as data code, thus it ought to be embodied into the data field identified by Word Identifier i belonging to medium of Screen identified by Definitive Identifier k, via W04 Pallet. So, data code must not exist thereabouts at the point of the operation of W02 Pallet.

On the other hand, the presence of data code means the involvement of an action that semantic quality embodied via humans based on the Reduction of the Providence of Existence into the computer space must be reduced by the action to W03 Pallet which imitates Consciousness Unit-Link.

Next, the 'Attribute Check' (12805a) is a logic to check if the data code existent in the data field on W02 Pallet identified by Word Identifier i belonging to Definitive Identifier k is accommodated with conditions or not for being reduced to W03 Pallet imitating Consciousness Unit-Link. Specifically, in ' IF IsNumeric(W02.@%k@>@%i@}) = True Then' (12805b), the '@%k@' is the independent variable part of Definitive Identifier k, and the '@%i@' is the independent variable part of Word Identifier i, so in case of the Word whose name of 'Manufacturing Costs Total Standard Value' and whose Identifier is 'ENTMKELVL' , the Word belonging to the Screen whose definitive name is 'Conversion Value Standard Ledger Management' and its Definitive Identifier of 'UGECG907' , the codes become as follows:
@%k@=UGECG907
@%i@= ENTMKELVL
and the Attribute Check logic is univocally determined as ' ' IF IsNumeric (W02.UGECG907.ENTMKELVL) = True Then' .

The action of these codes is to check if the attribute of data code existent in the data field identified by 'UGECG907.ENTMKELVL' on W02 Pallet is a numeric as regulated in advance, or not.

Next, the 'Acceptance' (step 12807a) is a logic to check, through 'Attribute Check,' if data code existent in the data field identified on W02 Pallet identified by Word Identifier i belonging to Definitive Identifier k was an attribute as regulated in the beginning or not. Specifically, it is filled in accordance with the logic of 'Attribute Check' .

The next 'Restart Counter +1' (step 12809a) is a logic to make 'and 1' to the data code in the data field on W02 Pallet identified by the identifier 'CTR' which means a restart counter concerned with Word Identifier i belonging to Definitive Identifier k. Specifically, the 'Restart Counter +1' logic composed of the codes is univocally determined by ' W02. @%k@.@%i@_CTR - W02.@%k@.@%i@_CTR + 1' (12809b) in the codes part 128B.

That is, in 'W02.@%k@.@%@_CTR - W02.@%k@.@%i@_CTR + 1' (12809b), the '@%k@' is the independent variable part of Definitive Identifier k, and the '@%i@' is the independent variable part of Word Identifier i, so in case of the Word whose name of 'Manufacturing Costs Total Standard Value' and whose Identifier of ' ENTMKELVL' , the Word belonging to the Screen whose definitive name is 'Conversion Value Standard Ledger Management' and its Definitive Identifier of 'UGECG907' , the codes become as follows:
@%k@=UGECG907
@%i@= ENTMKELVL
and the 'Restart Counter +1' logic is univocally determined as ' W02. UGECG907.ENTMKELVL_CTR - W02.UGECG907.ENTMKELVL_CTR + 1' .

The action of these codes is to add 1 to the data field on W02 Pallet identified by the identifier 'CTR' which means a restart counter concerned with Word Identifier i belonging to Definitive Identifier k. Next, the 'Restart' (step 12811a) is a logic to check if 'Restart' is required or not by comparing the data field on W02 Pallet identified by the identifier 'CTR' which means a restart counter concerned with Word Identifier i belonging to Definitive Identifier k, with the data field of the fixed identifier on W02 Pallet which means the maximum number of times of Restart. Specifically, the 'Restart' logic composed of codes is univocally determined by 'If W02.@%k@.@%i@ CTR} < W02.RCL_MAX Then' (12811b) and 'If W02.@%k@.@%i@ CTR} > W02.RCL_MAX Then' (12812b).

That is, in ' If W02.@%k@.@%i@ CTR} < W02.RCL_MAX Then' (12811b) and 'If W02.@%k@.@%i@ CTR} > W02.RCL_MAX Then' (12812b)' , the '@%k@' is the independent variable part of Definitive Identifier k, and the '@%i@' is the independent variable part of Word Identifier i, so in case of the Word whose name is 'Manufacturing Costs Total Standard Value' and whose Identifier is 'ENTMKELVL' , the Word belonging to the Screen whose definitive name is 'Conversion Value Standard Ledger Management' and whose Definitive Identifier is 'UGECG907' , the codes become as follows:

@%k@=UGECG907
@%i@= ENTMKELVL

and the 'Restart' logic is univocally determined as 'If W02. UGECG907.ENTMKELVL CTR} > W02.RCL_MAX Then' and 'If W02. UGECG907.ENTMKELVL CTR} < W02.RCL_MAX Then' .

The action of these codes is to make large and small comparison of the data filed on W02 Pallet identified by the identifier 'CTR' which means a restart counter concerned with Word Identifier i belonging to Definitive Identifier k and the data field of the fixed identifier on W02 Pallet which means the maximum number of times of Restart.

Next, the 'Restart Flag Set' (step 12813a) is a logic to set a Flag which directs Pallet Function to restart all Homogeneity Vectors mounted on W02 Pallet. Specifically, it is univocally determined as 'W02.RCL_FLG = True' (12813b) in the codes part 128B.

Next, 'Refusal Flag Set' (step 12815a) is a logic to set 'Attribute Test Refused' into the data field of 'Refusal Flag' identified by Word Identifier i belonging to Definitive Identifier k. Specifically, the 'Refusal Flag' logic composed of code column is univocally determined as 'W02.@%k@.@%i@ NON} = True' in the codes part 128B.

That is, in 'W02.@%k@.@%i@ NON} = True' (12815B), the '@%k@' is the independent variable part of Definitive Identifier k, and the '@%i@' is the independent variable part of Word Identifier i, so in case of the Word whose name is ' Manufacturing Costs Total Standard Value' and whose Identifier of 'ENTMKELVL' , the Word belonging to the Screen whose definitive name is 'Conversion Value Standard Ledger Management' and whose Definitive Identifier is 'UGECG907' , the codes become as follows:

@%k@=UGECG907
@%i@= ENTMKELVL

and the Refusal Flag Set logic composed of codes is univocally determined as 'W02.@%k@.@%i@_NON = True' (12815B) in the codes aprt 128B.

That is, in 'W02.@%k@.@%i@_NON = True' (12815B), the '@%k@' is the independent variable part of Definitive Identifier k, and the '@%i@' is the independent variable part of Word Identifier i, so in case of the Word whose name is ' Manufacturing Costs Total Standard Value' and whose Identifier is 'ENTMKELVL', the Word belonging to the Screen whose definitive name is 'Conversion Value Standard Ledger Management' and whose Definitive Identifier is 'UGECG907' , the codes become as follows:

@%k@=UGECG907
@%i@= ENTMKELVL

and the Refusal Flag Set logic is univocally determined as 'W02.UGECG907.ENTMKELVL_NON = True' .

The action of these codes is to set 'Refusal Flag' into the data field identified by 'Refusal Flag' concerned with Word Identifier i belonging to Definitive Identifier k.

As mentioned above, by the operation of the logic of Homogeneity Vectors mounted on W02 Pallet, a check is implemented to see if the data code input via medium of Screen possesses Attribute satisfying the Providence of Existence or not.

Further, in case of the Words 'Operation Key' and 'Direction Command' , these words play roles of Deuteronomy in the simulated environment that was reduced so as to simulate the Providence of Existence in the computer space, so necessitated herein are logic for establishment of 'Unit-Link Disintegration' and the 'Providence of Existence' . These logic are realized in the part of the 'Attribute Check ' (step 12805a). Specifically, it is determined by the following codes:

CTRL. NxtPltIK = " @%12@"
CTRL.NxtScnIK = " @%49@"
CTRL.Continue = @%47@.

That is, the Pallet Identifier '@%12@' which is operated next to W02 Pallet is set into the data field identified by the identifier 'CTRL.NxtPltIK,' and the identifier of medium of Screen which is embodied on its extension is set into the data field identified by the identifier' CTRL. NxtScnIK', and the identifier '@%47@' indicating whether 'Unit-Link Disintegration' is implemented or not (i.e., Flag) is set into the data field identified by the identifier 'CTRL.Continue.'

<W03 Duplication Vector>

The various points of Logical Structure possessed by ' W03 Duplication Vector' based on the principle theoretical base is as shown in Fig. 129, as already aforementioned.

The 'W03 Duplication Vector' Y3(k,i) is one component consisting of the 'Scenario Function' which is represented by the following expression:

$$T0 = \Phi 0\ (+\{\Phi p\ \{\qquad , L2(k, i)\ , P2(j)\}\ )k$$

$$+\ \Phi p\ \{Y3(k, i)\ , L3(k, i)\ , P3(j)\ , T1(f)\}$$

$$+\{\Phi p\ \{Y4(k, i)\ , L4(k, i)\ , P4(j)\}\}\ k))$$

and it is a function to determine software irrespective of its business operation, its application field, its programming language, and its installment environments. Its independent variables are only 'Definitive Identifier' k and 'Word Identifier' i.

A flowchart part (129A) shown in Fig. 129 has a logical structure of the function Y3(k,i) of W03 Duplication Vector, and the codes (129B) mean a Program Template which represents the function Y3(k,i) of W03 Duplication Vector in Visual Basic, for example.

The 'Y3(k,i)' (12901a) in the flowchart (129A) means it is an identifier that identifies the program part of W03 Duplication Vector which imitates 'Revelation and Association' identified by Word Identifier i belonging to Definitive Identifier k. That is, this means Program Identifier expressed in codes is also determined only by the same Word Identifier i belonging to Definitive Identifier k as in Definite Unit-Link 1413.

Specifically, Program Identifier composed of codes is determined as 'Private Sub Y3_@%k@_@%i@()' (12901b) is the codes part (129B). That is, in ' Private Sub Y3_@%k@_@%i@()' (12901b), the '@%k@' is the independent variable part of Definitive Identifier k, and the '@%i@' is the independent variable part of Word Identifier i, so in case of the Word whose name is ' Manufacturing Costs Total Standard Value' and whose Identifier is 'ENTMKELVL' , the Word belonging to the Screen whose definitive name is 'Conversion Value Standard Ledger Management' and whose Definitive Identifier is 'UGECG907' , the codes become as follows:

@%k@=UGECG907

@%i@= ENTMKELVL

and the Program Identifier is univocally determined as 'Private Sub Y3_UGECG907_ ENTMKELVL()' .

Next, the 'Empty' (step 12903a) is a logic to check if 'semantic quality of Definite Unit-Link' was induced or not to the data field 12504 on W02 Pallet identified by Word Identifier i belonging to Definitive Identifier k, the semantic quality desiring to establish 'Synchronization' as semantic quality of Consciousness Unit-Link by Revealing itself to the Consciousness Unit-Link in which the 'Kuh' is accomplished. Specifically, the Empty logic composed of codes is determined as 'IF W02.@%k@_@%i@ <> "" Then' (12903b) in the codes part 129B.

That is, in 'IF W02.@%k@_@%i@ <> "" Then' (12903b), the '@%k@' is the independent variable part of Definitive Identifier k, and the '@%i@' part is the independent variable part of Word Identifier i, so in case of the Word whose name is 'Manufacturing Costs Total Standard Value' and whose Identifier is 'ENTMKELVL', the Word belonging to the Screen whose definitive name is 'Conversion Value Standard Ledger Management' and whose Definitive Identifier si 'UGECG907' , the codes become as follows:

@%k@=UGECG907

@%i@= ENTMKELVL

and the ' Empty ' logic is univocally determined as ' IF W02.UGECG907.ENTMKELVL <> "" Then' .

The action of these codes is to check if data code is existent in the data field identified by 'UGECD907. ENTMKELVL' on W02 Pallet. Next, 'Duplication' (step 12905a) is a logic to succeed the semantic quality of Definite Unit-Link to Event Unit-Link 1417 by 'Revelation' and 'Association, ' if the ' semantic quality of Definite Unit-Link' was induced to the data field 12504 on W02 pallet identified by Word Identifier i belonging to Definitive Identifier k, the semantic quality desiring to establish 'Synchronization' as semantic quality of Consciousness Unit-Link by Revealing itself to the Consciousness Unit-Link, in which the 'Kuh' is established. Specifically, the 'Duplication' logic composed of codes is determined as 'W03.@%k@_@%i@ = W02.@%k@ @%i@}' (12905b) in the codes part 129B.

That is, in 'W03.@%k@_@%i@ = W02.@%k@ @%i@}' (12905b), the '@%k@' is the independent variable part of Definitive Identifier k, and the '@%i@' is the independent variable part of Word Identifier i, so in case of the Word whose name is 'Manufacturing Costs Total Standard Value' and whose Identifier is 'ENTMKELVL' , the Word belonging to the Screen with whose definitive name of 'Conversion Value Standard Ledger Management' and its Definitive Identifier is 'UGECG907' , the codes become as follows:

@%k@=UGECG907
@%i@= ENTMKELVL
and the ' Duplication ' logic is univocally determined as 'W03.UGECG907.ENTMKELVL = W02. UGECG907.ENTMKELVL' .

The action of these codes is to duplicate data code existent in the data field identified by 'UGECD907.ENTMKELVL' on W02 Pallet, to the data field on W03 pallet identified by 'UGECG907.ENTMKELVL' .

Further, when End (12907a) of 'Duplication' (step 12905a) and 'Empty' (step 12903a) are FALSE (12909a), the process ends 'EnK Sub' (12911b), so as only to induce the univocal 'semantic quality' to the Word identified by Definitive Identifier k and Word Identifier i. This is because the Providence of Existence of the present invention lies in the premise of the univocal semantic quality.

<W03 Homogeneity Vector>

The various points of Logical Structure possessed by ' W03 Homogeneity Vector' based on the principle theoretical base is as shown in Fig. 130, as already aforementioned.

The 'W03 Homogeneity Vector' L3(k,i) is one component consisting of the 'Scenario Function' which is represented by the following expression:

$$T0 = \Phi 0\ (+\{\Phi p\ \{\qquad , L2(k, i)\ , P2(j)\}\ )k$$

$$+\ \Phi p\ \{Y3(k, i)\ , L3(k, i)\ , P3(j)\ , T1(f)\}$$

$$+\{\Phi p\ \{Y4(k, i)\ , L4(k, i)\ , P4(j)\}\}\ k))$$

and it is a function to determine software irrespective of its business operation, its application field, its programming language and its installment environment. Its independent variables are only 'Definitive Identifier' k and 'Word Identifier' i.

A flowchart (130A) shown in Fig. 130 is a logical structure of the function L3(k,i) of 'W03 Homogeneity Vector' , and the codes (130B) are a Program Template which represents the function L3(k,i) of 'W03 Homogeneity Vector' in Visual Basic, for example.

The 'L3(k,i)' (13001a) in the flowchart (130A) means it is Program Identifier which identifies the program part of 'W03 Homogeneity Vector' that imitates 'Event Unit-Link' 1417 induced by the 'semantic quality' of the Consciousness Unit-Link, in which the 'Kuh' is accomplished, to be identified by Word Identifier i belonging to Definitive Identifier k.

That is, it means that the Program Identifier embodied in codes is also determined only by Definitive Identifier k and Word Identifier i belonging to it. Specifically, Program Identifier composed of codes is determined as 'Private Sub L3_@%k@_@%i@()' (13001b) in the codes part (130B).

That is, in 'Private Sub L3_@%k@_@%i@()' (13001b), the '@%k@' is the independent variable part of Definitive Identifier k, and the '@%i@' is the independent variable part of Word Identifier i, so in case of the Word whose name is ' Manufacturing Costs Total Standard Value' and whose Identifier is 'ENTMKELVL', the Word belonging to the Screen whose definitive name is 'Conversion Value Standard Ledger Management' and whose Definitive Identifier is 'UGECG907' , the codes become as follows:
@%k@=UGECG907
@%i@= ENTMKELVL and the Program Identifier logic is univocally determined as ' Private Sub L3_ UGECG907_ENTMKELVL()' .

Next, the 'Empty' (step 13303a) is a logic to check if Event Unit-Link 1417 induced by the ' semantic quality ' of the Consciousness Unit-Link, where the 'Kuh' is established, is existent in the data field 13005 on W03 Pallet identified by Word Identifier i belonging to Definitive Identifier k.

The condition of this 'Empty' becomes a condition in which data code is not existent in the 1$^{st}$ 'Empty' , that is, the data field on W03 Pallet identified by Word Identifier belonging to Definitive Identifier k, as a rule of the Providence of Existence.

The reason non-existence of data code is treated as 'Empty' is as follows: The fact that the data field was prepared, to be identified by Word Identifier i which shall belong to medium of Screen and the Screen that shall be identified by Definitive Identifier k, means that semantic quality of the Consciousness Unit-Link, where the 'Kuh' is accomplished shall always be induced by W03 Pallet' s Homogeneity Vector as data code, thus it ought to be embodied into the data field identified by Word Identifier i belonging to medium of Screen identified by Definitive Identifier k, via W04 Pallet. So, data code must not exist thereabouts at the point of the operation of W03 Pallet.

That is, it means the only 'Output Attribute' shall be allowed essentially from the point of the Providence of existence.

By the way, in the information processing system in which the Providence of Existence has been reduced into the computer space, an action to reduce semantic quality embodied via humans into W03 Pallet which imitates Consciousness Unit-Link becomes necessary so as to satisfy the Providence of Existence. The attribute used for this purpose is 'Input Attribute'

Accordingly, in case of the Word regulated as 'Input Attribute' , in order to satisfy the Providence of Existence, data code that is semantic quality embodied via humans is input by humans, and the data code shall exist in the data field identified by the Word Identifier. And, the presence of the data code means the completion of 'Synchronization' by 'Reduction' . Therefore, an action of 'Self Creation' shall be made unnecessary by Homogeneity Vector.

However, in the current computers or OS, even if ' Output Attribute' is regulated, the data code output in advance happens to be succeeded as it is and input. So, even in such an instance, in the 'Output Attribute', 'Self Creation' shall always be made operable. The means is the 2nd 'Empty' .

Based on this background, specifically in case of the Word 'Input Attribute' and 'Input/Output Attribute' , the 'Empty' logic composed of codes is determined by the 1st 'Empty' of ' IF W03.@%k@.@%i@} <> "" Then' (13003b) in the codes part 130B.

On the other hand, in case of the Word 'Output Attribute' , the 'Empty' logic composed of codes is determined by the 2nd 'Empty' of 'IF W03.@%k@.@%i@} = W03.@%k@.@%i@}' (13007b) of the 'IF W03.@%k@.@%i@} <> "" Then' (13003b) in the codes part 130B.

That is, in 'IF W03.@%k@.@%i@} <> " " Then' (13003b), the '@%k@' is the independent variable part of Definitive Identifier k, and the '@%i@' is the independent variable part of Word Identifier i, so in case of the Word whose name is 'Manufacturing Costs Total Standard Value' and whose Identifier is 'ENTMKELVL' , the Word belonging to the Screen whose definitive name is 'Conversion Value Standard Ledger Management' and whose Definitive Identifier is 'UGECG907' , the codes become as follows:

@%k@=UGECG907

@%i@= ENTMKELVL

and it is 'Input/Output Attribute' , so the 'Empty' logic is univocally determined as 'IF W03.UGECG907.ENTMKELVL <> "" us Then' .

The action of these codes is to check if data code does not exist or not in the data field on W03 Pallet identified by Word Identifier i belonging to Definitive Identifier k.

On the other hand, in case of the Word whose name is 'Managed Manufacturing Costs Total Standard Value ' and whose Word Identifier is 'MKELVL' , the Word belonging to the Screen whose Definitive name is ' Conversion Value Standard Ledger Management' and whose Definitive Identifier is 'UGECG907' , the codes become as follows:

@%k@=UGECG907

@%i@= MKELVL

and it is 'Output Attribute' , so the 'Empty' logic is univocally determined as ' IF W03.UGECG907.MKELVL = W03.UGECG907.MKELVL Then' . The action of these codes is 'TRUE' unconditionally. That is, the action of these codes is a check to reconfirm if self (W03.UGECG907.MKELVL) is the self (W03.UGECG907.MKELVL). From the meaning of the term, Self is not the Others and must be itself. After all, this check becomes inevitably TRUE.

The semantic quality of this Consciousness Unit-Link is normally memorized on medium File in the environment reduced into the computer space. Therefore, specifically, the @%k@ part in 'W03.@%k@.@%i@ = W03.@%ks@.@%i@' (13007b) is Independent Variable of Definitive Identifier k of the 'Self' embodiment destination and the @%i@ part is Independent Variable of 'Word Identifier' i of the 'Self' memorizing origin.

So, in case of the Word whose name is 'Manufacturing Costs Total Standard Value' and whose Identifier is 'ENTMKELVL' , the Word belonging to the Screen with whose definitive name is 'Conversion Value Standard Ledger Management ' and whose Definitive Identifier is 'UGECG907' , the codes become as follows:

@%k@=UGECG907

@%i@= ENTMKELVL

and the 'Self' embodiment destination of the 'Self Creation' logic is univocally determined as 'W03.UGECG907.ENTMKELVL = W03.@%ks@.@%i@,

On the other hand, speaking from the rule of the Providence of Existence, the 'Self' memorizing origin W03.@%ks@.@%i@ shall correspond to 'Manufacturing Costs Total Standard Value Ledger' (UGECF120) and 'Conversion Value Standard Ledger' (UGECD100) that were drawn out by the 'Homogeneity Map' preparation.

However, speaking from the rule of the Providence of Existence, ' semantic quality' must be univocal. Hereupon, a concept of 'Equivalent Word' can be applied to. That is, 'Homogeneity Vector' having 'Self Creation' by taking ' Manufacturing Costs Total Standard Value Ledger' (UGECF120) as 'Self' memorizing origin and Homogeneity Vector' having 'Autopoiesis' by taking 'Conversion Value Standard Ledger' (UGECD100) as 'Self' memorizing origin are created separately.

The former is determined as 'W03.UGECG907.ENTMKELVL = W03.UGECF120.MKELVL ' and the latter as

'W03.UGECG907.ENTMKELVL = W03.UGECD100.MKELVL' .

However, in W03 Pallet possessing data field of 'W03.UGECG907.ENTMKELVL' of the 'Self' embodiment destination, neither data field of 'W03.UGECF110.MKELVL' nor data field of 'W03.UGECD100.MKELVL' can be set based on the various points of 'Pallet' . Therefore, they are not inscribed in the W03 Pallet' s Word Table of the client side (Fig. 123 and Fig. 124). These are what have been set in W03 Pallet on the system of the 'Server' side.

That is, the Self memorizing origin concerned with ' W03.UGECG907.ENTMKELVL of the 'Self' embodiment destination is only limited to the data field that has been set in W03 Pallet of the 'Client' side. Hereupon, by returning to Image diagram (Fig. 109) and Word Table (fig. 123 and Fig. 124) that were prepared as a memorandum based on the requirement desiring to develop information processing system, the Self memorizing origin shall be specified.

Then, the data field set on W03 Pallet of the ' Client' side corresponding to ' Manufacturing Costs Total Standard Value Ledger' (UGECF120) is 'W03.UGECG907.ENTMKELVL' (10909) and the data field set on W03 Pallet of the 'Client' side corresponding to 'Conversion Value Standard Ledger' (UGECD100) is 'W03.UGECG907.MKELVL' (10916).

Likewise, the former is consequently determined univocally as 'W03.UGECG907.ENTMKELVL= 'W03.UGECG907.ENTMKELVL' and the latter as ' W03.UGECG907.ENTMKELVL = W03.UGECG907.MKELVL' .

Further to add, in case the ' Self Creation' logic cannot be determined in this manner, that is, if Word Identifier to identify the 'Self' memorizing origin is not existent, it has to be determined after inquiring to the concerned party requiring the development of the information processing system. During the process of determining the Self Creation logic, new Definitives and new Words shall be drawn out, so the uncertainty shall be eventually eliminated in principle.

Next, 'Acceptance' (step 13009a) is a logic to check the presence of data code induced by 'Self Creation' into the data field on W03 Pallet identified by identified by Word Identifier i belonging to Definitive Identifier k. Specifically, the 'Acceptance' logic is univocally determined, which is composed of codes ' IF W03.@%k@.@%i@} <> Then "" (13009b) is the codes part 130B.

That is, in IF W03.@%k@.@%i@} <> "" Then' (13009b), the '@%k@' part is Independent Variable of Definitive Identifier k and the '@%i@' part is Independent Variable of 'Word Identifier' i, so in case of the Word whose name is 'Manufacturing Costs Total Standard Value' and whose Identifier is 'ENTMKELVL' , the Word belonging to the Screen whose definitive name is 'Conversion Value Standard Ledger Management ' and whose Definitive Identifier is 'UGECG907' , the codes become as follows:

@%k@=UGECG907

@%i@= ENTMKELVL

and the 'Acceptance' logic is univocally determined as 'IF W03. UGECG907.ENTMKELVL <> Then "" (13009b) is the codes part 130B.

That is, in IF W03.@%k@.@%i@} <> "" Then' .

Next, 'Restart Counter + 1' (step 13011a) is a logic to make 'add 1' to the data code in the data field on W03 Pallet identified by identifier 'CTR' meaning Restart Counter concerned with Word Identifier i belonging to Definitive Identifier k. Specifically, the 'Restart Counter +1' logic is univocally determined, which is composed of the codes 'W03.@%k@.@%i@}_CTR + 1' (13011b) in the codes part 130B.

That is, in 'W03.@%k@.@%i@}_CTR + 1' (13011b), the @%k@ part is Independent Variable of Definitive Identifier k and the @%i@ part is Independent Variable of 'Word Identifier' i, so in case of the the Word whose name is Manufacturing Costs Total Standard Value' and whose Identifier is 'ENTMKELVL' , the Word belonging to the Screen whose definitive name is 'Conversion Value Standard Ledger Management' and whose Definitive Identifier is 'UGECG907' , the codes become as follows:

@%k@=UGECG907

@%i@= ENTMKELVL

and the 'Restart Counter + 1' logic is univocally determined as W03. UGECG907.ENTMKELVL_CTR = W03.UGECG907.ENTMKELVL_CTR+1' .

The action of these codes is to 'add 1' to the data code in the data field on W03 Pallet identified by identifier 'CTR' meaning Restart Counter concerned with Word Identifier i belonging to Definitive Identifier k.

Next, 'Restart' (step 13013a) is a logic to check if 'Restart' is required or not by implementing large and small comparison of the data filed on W03 Pallet identified by the identifier 'CTR' which means a Restart Counter identified by identifier 'CTR' meaning Restart Counter concerned with Word Identifier i belonging to Definitive Identifier k, with the data field of the fixed identifier on W03 Pallet which means the maximum number of times of Restart. Specifically, the 'Restart' logic composed of codes is univocally determined by 'If W03.@%k@.@%i@}_CTR < W03.RCL_MAX Then' (13013b) and 'If W03.@%k@.@%i@}_CTR >= W03.RCL_MAX Then' (13014b).

That is, in 'If W03.@%k@.@%i@}_CTR < W03.RCL_MAX Then' (13013b) and 'If W03.@%k@.@%i@}_CTR >= W03.RCL_MAX Then' (13014b), the @%k@ part is Independent Variable of Definitive Identifier k and the @%i@ part is Independent Variable of 'Word Identifier' i, so in case of the Word whose name is 'Manufacturing Costs Total Standard Value' and whose Identifier is 'ENTMKELVL', the Word belonging to the Screen whose definitive name is '

Conversion Value Standard Ledger Management' and whose Definitive Identifier is 'UGECG907' , the codes become as follows:
@%k@=UGECG907
@%i@= ENTMKELVL
and the ' Restart ' logic is univocally determined as 'W03.UGECG907.ENTMKELVL_CTR < W03.RCL_MAX Then' and 'If W03.UGECG907.ENMKELVL CTR >= W03. RCL_MAX Then'

The action of these codes means to implement large and small comparison of the data filed on W03 Pallet identified by the identifier 'CTR' which means a restart counter concerned with Word Identifier i belonging to Definitive Identifier k, with the data field of the fixed identifier on W03 Pallet which means the maximum number of times of Restart. Next, 'Restart Flag Set' (step 13015a) is a logic to set Flag directing for the Pallet Function to again restart all Homogeneity Vectors mounted on W03 Pallet. Specifically, it is univocally determined as 'W03.RCL_FLG = True' (13015b) in the codes part 130B.

Next, 'Refusal Flag Set' (step 13017a) is a logic to set a meaning of 'Attribute Check Refused' into the data field on the 'Refusal Flag' identified by Word Identifier i belonging to 'Defintive Identifier k. Specifically, the 'Refusal Flag Set' logic composed of codes is univocally determined by 'W03.@%k@.@%i@_NON = True' (13017b) in the codes part 130B.

That is, in 'W03.@%k@.@%i@_NON = True' (13017b), the '@%k@' part is Independent Variable of Definitive Identifier k and the '@%i@' part is Independent Variable of 'Word Identifier' i, so in case of the Word whose name is ' Manufacturing Costs Total Standard Value' and whose Identifier is 'ENTMKELVL' , the Word belonging to the Screen whose definitive name is ' Conversion Value Standard Ledger Management' and whose Definitive Identifier is 'UGECG907' , the codes become as follows:
@%k@=UGECG907
@%i@= ENTMKELVL
and the 'Refusal Flag Set' logic is univocally determined as 'W03.UGECG907.ENTMKELVL_NON = True' .

The action of these codes means to set ''Refusal Flag' into the data field identified by 'Refusal Flag' concerned Word Identifier i belonging to Definitive Identifier k.

Further, on W03 Pallet, 'Direction Action Vector', 'Routing Action vector' , 'Work Requirement Action Vector' and ' Structural Adjustment Action Vector' are mounted, in addition to these Tense Control Vectors. These are detailed later. Through the operation of the logic of 'Duplication Vector' and 'Homogeneity Vector' , mounted on W03 Pallet, the data code input via medium Screen shall become synchronized with the Consciousness meaning-space 703that was reduced as the data field of W03 Pallet.

Also through the operation of the logic of Duplication Vector' and 'Homogeneity Vector' , mounted on W04 Pallet, the data code created on the main memory by W03 Pallet shall have been embodied via medium Screen.

That is, by solving Scenario Function by using Definitive Identifier and Word Identifier as Independent Variables, up to 1 statement of program composed of codes, and word and File of a requirement or DB have been univocally determined, i.e., as a quality not containing black box, at the same time as prescribed.

<W03 Action Vector>

Onto W03 Pallet, in addition to these Tense Control Vectors, the following are mounted:

- 'Command Action Vector' to handle Open of memory medium File
- 'Command Action Vector' to handle Reference of memory medium File
- 'W03 Work Requirement Action Vector'
- 'Command Action Vector' to handle Memory to memory medium File
- 'W03 Routing Action Vector'
- 'Command Action Vector' to handle Close of memory medium File.

The various points of the logical structure based on the principle base possessed by W03 Action Vector is as shown in Fig. 131, as already mentioned.

The 'W03 Action Vector' P3(j) is one element constituting Scenario Function shown by the following expression;

$$T0 = \Phi 0 \, (+ \{\Phi p \{ \qquad , L2(k, i) , P2(j)\} \}k$$

$$+ \Phi p\{ Y3(k, i) , L3(k, i) , P3(j), T1(f)\}$$

+ {Φp {Y4(k, i) , L4(k, i) , P4(j)}} k)

and, it is a function which determines software, regardless of its business operation, its application field, its programming language, its installment environment. Its Independent Variable is only an 'Action Operator' j.

The flowchart part (131A) shown in Fig. 131 means it is a Logical Structure of Function P3(j) of W03 Action Vector, and the codes (131B) are a Program Template of Function P3(j) of W03 Action Vector expressed by Visual Basic, for example.

The P3(j) (13101a) in the flowchart 131A means that it is Program Identifier which identifies a program part of W03 Action Vector that is identified by Action Operator j belonging to Definitive Identifier M. That is, it is meant that the Program Identifier materialized in codes is determined only by 'Action Operator' j. Specifically, the Program Identifier composed of codes 'Private Sub P3 @%M@ @%j@()' (13101b) can be determined.

That is, in the "Private Sub P3 @%M@ @%j@()' (13101b), the '@%M@' part is an Independent Variable part of Definitive Identifier M, and the '@%j@' part is an Independent Variable part of Action Operator j. Hereupon, in case of 'Command Action Vector', the Definitive Identifier M is univocally determined as 'Definitive Identifier' concerned with 'Logical Record' that identifies medium that is an object to operate. On the other hand, in case of 'Routing Action Vector', 'Structural Adjustment Action Vector' and 'Work Requirement Action Vector', an identifier 'ME', for example, which means medium of main memory, is univocally allocated.

Also, in case of W03 Action Vector, the action with the following kinds is necessitated with Action Operator j:

- 'Command Action Vector' to handle Open of memory medium File
- 'Command Action Vector' to handle Reference of memory medium File
- 'W03 Work Requirement Action Vector'
- 'Command Action Vector' to handle Memory to memory medium File
- 'W03 Routing Action Vector'
- 'Command Action Vector' to handle Close of memory medium File.

Further to add, the 'Command Action Vector' to handle Open of memory medium File is an Action Vector which opens File memorizing 'semantic quality' concerned with Self that is referred to during 'Self Creation' of W03 Homogeneity Vector.

Also, the 'Command Action Vector' to handle Reference of memory medium File is an 'Action Vector' which reads File memorizing 'semantic quality' concerned with Self that is referred to during 'Self Creation' of W03 Homogeneity Vector.

The 'W03 Work Requirement Action Vector' is an 'Action Vector' which checks on right or wrong of the result of 'Self Creation' of W03 Homogeneity Vector.

The 'Command Action Vector' to handle Memory to memory medium File is an 'Action Vector' which memorizes the result of 'Self Creation' of W03 Homogeneity Vector into memory medium File.

The 'Routing Action Vector' is an 'Action Vector' which sets identifier of W04 Pallet which implements Embodiment Edit of the data code created by the concerned W03 Pallet.

The 'Command Action Vector' to handle Close of memory medium File is an 'Action Vector' which closes memory medium File which was opened.

Accordingly, for example, in case of the 'Action Vector' to Open memory medium File, with its action name 'Open' and Action Operator 'OPEN' against File with Definitive name 'Conversion Value Standard Ledger' and Definitive Identifier 'UGECD100', the Program Identifier becomes as follows:

@%M@=UGECD100

@%j@=OPEN

Eventually, the Program Identifier of W03 Action Vector is univocally determined as 'Private Sub P3_UGECD100_OPEN ()'.

Also, for example, in case the action name is 'Reference' and Action Operator is 'REAK' against File with its Definitive name 'Conversion Value Standard Ledger' and its Definitive Identifier 'UGECD100', the 'Command Action Vector' to handle Reference of memory medium File, for example, becomes as follows:

@%M@=UGECD 100

@%j@=REAK

and the Program Identifier is univocally determined as 'Private Sub P3_UGECD100_REAK ()'.

Also, as for 'W03 Work Requirement Action Vector,' in case, for example, Action name is 'Range Check' and Action Operator is 'RNG' which is concerned with Word having Word name of 'Manufacturing Costs Total Standard Value' and Word Identifier of 'MKELVL' against File with its Definitive name 'Conversion Value Standard Ledger' and its Definitive Identifier 'UGECD100', the '@%M%' becomes 'Main Memory' univocally and the Definitive Identifier also becomes 'ME' univocally, so it becomes as follows:
@%M@=ME
@%j@=UGECD100_MKELVL_RNG
and the Program Identifier is univocally determined as 'Private Sub P3_ME_UGECD100_MKELVL_RNG ()'.

Further, the "W03 Work Requirement Action Vector' occurs as for the logic to create Self from plural words during 'Self Creation' concerned with W03 Homogeneity Vector.

Also, for example, in case Action name is 'Memory' and Action Operator is 'WRITE' against File with its Definitive name 'Conversion Value Standard Ledger' and its Definitive Identifier 'UGECD100', the 'Command Action Vector' to handle Memory to memory medium File, for example, becomes as follows:
@%M@= UGECD100
@%j@=WRITE
and the Program Identifier is univocally determined as 'Private Sub P3_UGECD100_WRITE ()'.

Also, in case Definitive name univocally becomes 'Main Memory' and Definitive Identifier also univocally becomes 'ME' and when Action name is 'Route Setting' and Action Operator is 'RT1', the 'Routing Action Vector' becomes as follows:
@%M@= ME
@%j@=RT1
and the Program Identifier is univocally determined as Private Sub P3_ME_RT1 ()'.

Also, in case Action name is 'Close' and Action Operator is 'CLOSE' against File with its Definitive name 'Conversion Value Standard Ledger' and its Definitive Identifier 'UGECD100', the 'Command Action Vector' to handle Close of memory medium File, for example, becomes as follows:
@%M@= UGECD100
@%j@=CLOSE
and the Program Identifier is univocally determined as 'Private Sub P3_UGECD100_CLOSE ()'.

Next, 'Execute' (step 13103a) is a logic to check whether to execute or not W03 ACTION Vector identified by Action Operator j belonging to Definitive Identifier M. As to Tense Control Vector, it is implemented by 'Empty' logic, but as for Action Vectors, it becomes a logic to check whether the 'Action Vector Execute Done Flag' has not been set or not. This is because the Action Vector is a logic produced from the Providence of Existence as a result of reducing the Providence of Existence into the computer space.

That is, in 'IF WFL.@%M@ @%j@ FLG <> "" Then' (13103b), the '@%M@' is the independent variable part of Definitive Identifier M and the '@%j@' is the independent variable part of Action Operator j, so, for example, the 'Routing Action Vector' with Definitive Identifier 'ME' and Action Operator 'RT1,' becomes as follows:
    @%M@=ME
    @%j@=RT1,
and the 'Execute' logic is univocally determined as 'IF WFL.ME_RT1_FLG <> "" Then'.

The action of these codes is to implement check if a data code is not existent or not in the data field 12705 of Execute Done Flag (FLG) of the 'Routing Action Vector' on the 'Work Area (WFL)' identified by Action Operator j belonging to the Main Memory, that is, to implement check if 'Routing Action Vector' has not been executed or not.

Next, 'Execute Process' (step 13105a) is a logic of Execute of W03 Action Vector identified by Action Operator j belonging to Definitive Identifier M. That is, it executes actions purposed by individual W03 Action Vectors. The purposed action means 'Routing Action', 'Structural Adjustment Action', 'Directive Action' and 'Work Requirement Action'.

For example, in case of 'Routing Action Vector', it is an action purposed to set an identifier of W04 Pallet which does Embodiment Edit of the data code created in the related W03 Pallet , so for example, on the W03 Pallet, if a data code is existent in the data filed which is identified with Word name 'confirm' and Word Identifier 'QURYCM', belonging to Screen with Definitive name 'Conversion Value Standard Ledger Management' and Definitive Identifier 'UGECD100', it becomes self-evident, from Homogeneity Map, that it is only 'Restart Chain' and 'Scenario Chain "Required"'. Accordingly, it is univocally determined as
    CTRL.NxtPltIK = "UGECG907W04"
    CTRL.Continue = True ------ Scenario Chain "Required".

As mentioned above, as to the Execute Process, the self's 'Action Vector Execute Done Flag' is univocally set after the End of the purposed execution process.

Next, 'Acceptance Judgment' (step 13107a) is a logic to check the execute process of W03 Action Vector identified by Action Operator j belonging to Definitive Identifier M has been accepted or not, and this process becomes a check on Set Done of 'WFL.@%M@_@%j@_FLG' which is a flag of the self's Action Vector Execute Done. So, it is univocally determined as IF WFL. @%M@_@%j@_FLG' = "1" Then.

Preparation of Pallet Function (step 6409)

The 'preparation of Pallet Function' is a work to create a function that has a role of bundling logics composed of codes of the prepared 'Tense Control Vector,' 'Action Vector' and data fields of those logics' processing target into as 'W02 Pallet', 'W03 Pallet' and 'W04 Pallet'.

<<W02 Pallet Function>>

Fig. 55, as already explained, is a flowchart for explaining the preparation method of Pallet Function on which the W02 Pallet-belonging Pallet Function places unit programs (Duplication Vector and Homogeneity Vector) of every Word Identifier by disregarding the process sequence.

As shown by the Fig., in the W02 Pallet-belonging Pallet Function, the Program Identifier Φp(k, 2) (5501), which is a Pallet Function, is a series of codes determined by taking Definitive Identifier as Independent Variable. Herein, the Definitive Identifier 'k' means it is an identifier to identify medium of Screen. For example, Program Identifier of the Pallet Function mounted on W02 Pallet concerned with the name of 'Product-wise Inventory Status Grasping Screen' and Definitive Identifier 'UGECG907' becomes <Private Sub UGECG907W02()> in codes of Visual Basic.

The meaning of these codes is that it is a program (Private Sub) of 'Pallet Function mounted on W02' and it has been univocally determined with its Definitive Identifier k as Independent Variable.

When W02 Pallet Function starts to operate, a check is implemented, at first, to see if 'End Condition satisfied or not' (specifically, whether 'Tense Control Vector End Flag' or 'End Flag' is '1' or not (step 5503), and if the End Condition is satisfied it returns to Pallet Chain Function through 'W02 Pallet Function End' (step 5505).

Next, if the End Condition is not satisfied, the judgment is made in the judgment box of 'Tense Control Vector Activate Condition' to see if the 'Tense Control Vector Activate Condition' is satisfied or not (specifically, if the 'Tense Control Vector End Flag' is not '1' or not) (step 5507). If 'Tense Control Vector Activate Condition' is satisfied, a unit program group related to Tense Control Vector is activated in the process box 'Tense Control Vector Activate' (step 5509).

In the activated unit program group related to Tense Control Vector, unit programs for every Word Identifier (Homogeneity Vector) are placed by disregarding the process sequence.

Next, the judgment is made in the judgment box of 'Restart Flag Set Done' (step 5511) to see if restart is necessary or not upon returning from the unit program group related to Tense Control Vector, and if necessary, the unit program group related to Tense Control Vector is restarted (step 5521).

If restart is not necessary, a logic of making 'Tense Control Vector End Flag' into '1' is implemented, and the judgment is made in the 'End' judgment box (step 5515) to see if End or not (specifically, if 'End Flag' or 'Tense Control Vector End Flag' is '1' or not). If the End condition is satisfied, the End Flag is set, for assurance, in the process box of 'End Flag Set' (step 5517), then returns to the forefront of Pallet Function.

If the End condition is not satisfied, again for assurance, the End Flag is set in the process box of 'End Flag Set' (step 5517), and returns to the forefront of Pallet Function.

The following (from asterisk to asterisk) is a result of coding Pallet Function mounted on W02 Pallet concerned with the name of <Conversion Value Standard Ledger Management Screen> and the Definitive Identifier <UGECG907>.

```
'*************************************************************
 Public Sub UGECG907W02()
 '<Control Flag Initialize> -----*
 P2_INIT_FLG = ""
 P2_L_FLG = ""
 P2_END_FLG = ""
'<Control> -----*
Main_Chk:
'--- End Judgment ---
```

```
If P2_END_FLG = "1" _
 Or (P2_INIT_FLG   "1" _
 AnD P2_L_FLG = "1" ) Then
    GoTo Main_EnD
 EnD If
'··· Φp·P group (initial process) ···
 If P2_INIT_FLG = "" _
  AnD P2_L_FLG = "1" Then
' ·········<Initial Setting Group Activate
      Call P2_INIT_PROC
' ·········< Execute Done
      P2_INIT_FLG = "1"
      GoTo Main_Chk
 EnD If
'··· L group ···
 If P2_INIT·FLG = "1" _
 AnD P2_L_FLG = "" Then
'·········<Homogeneity Vector Group Activate
    Call P2_L_PROC
'········< Execute Done
    P2_L_FLG = "1"
    GoTo Main_Chk
 EnD If
'··· All End Check ···
 If P2_INIT_FLG = "1" _
 AnD P2_L_FLG = "1" Then
```

```
    P2_END_FLG = "1"
    GoTo Main_Chk
  EnD If
 Main_EnD:
 EdD Sub
'***********************************************************
'* W02 Initial Process group
'***********************************************************
Public Sub P2_INIT_PROC()
'Restart Counter Initial Setting
 W02_UGECG907_FACTCD_CNT = 0
 W02_UGECG907_QURYCM_CNT = 0
 W02_UGECG907_CHNGCD_CNT(15) = 0
 W02_UGECG907_SRCECD_CNT(15) = 0
 W02_UGECG907_PHSECD_CNT(15) = 0
 W02_UGECG907_CHNGAX_CNT(15) = 0
 W02_UGECG907_MANGCD_CNT(15) = 0
 W02_UGECG907_MANGNM_CNT(15) = 0
 W02_UGECG907_MKELVL_CNT(15) = 0
 W02_UGECG907_SELLINE0_CNT(15) = 0
 W02_UGECG907_SELOBJ_CNT = 0
 W02_UGECG907_SELCCM = 0
 W02_UGECG907_CNTCHNGCD(5) = 0
 W02_UGECG907_CNTSRCECD(5) = 0
 W02_UGECG907_CNTPHSECD(5) = 0
 W02_UGECG907_CNTCHNGAX(5) = 0
```

```
    W02_UGECG907_CNTMANGCD(5) = 0
    W02_UGECG907_CNTMANGNM(5) = 0
    W02_UGECG907_CNTMKELVL(5) = 0
    W02_UGECG907_APLLINENO(5) = 0
    W02_UGECG907_SELCMN = 0
    W02_UGECG907_ENTORY = 0
    W02_UGECG907_CHANGE = 0
    W02_UGECG907_DELEAT = 0
    W02_UGECG907_ENDEND = 0
    W02_UGECG907_ENTCHNGCD = 0
    W02_UGECG907_ENTSRCECD = 0
    W02_UGECG907_ENTPHSECD = 0
    W02_UGECG907_ENTCHNGAX = 0
    W02_UGECG907_ENTMANGCD = 0
    W02_UGECG907_ENTMANGNM = 0
    W02_UGECG907_ENTMKELVL = 0
EnD Sub
'*L2 Group
Public Sub P2_L_PROC()
  Call L2_UGECD907_FACTCD
  Call L2_UGECD907_QURYCM
  For N = 0 To 15-1
    Call L2_UGECD907_CHNGCD
    Call L2_UGECD907_SRCECD
    Call L2_UGECD907_PHSECD
    Call L2_UGECD907_CHNGAX
```

```
 Call L2_UGECD907_MANGCD
 Call L2_UGECD907_MANGNM
 Call L2_UGECD907_MKELVL
 Call L2_UGECD907_SELLINENO
Next
Call L2_UGECD907_SELOBJ
Call L2_UGECD907_SELCCM
For N = 0 To 5-1
 Call L2_UGECD907_CNTCHNGCD
 Call L2_UGECD907_CNTSRCECD
 Call L2_UGECD907_CNTPHSECD
 Call L2_UGECD907_CNTCHNGAX
 Call L2_UGECD907_CNTMANGCD
 Call L2_UGECD907_CNTMANGNM
 Call L2_UGECD907_CNTMKELVL
 Call L2_UGECD907_APLLINENO
Next
W02_UGECG907_SELCMN
W02_UGECG907_ENTORY
W02_UGECG907_CHANGE
W02_UGECG907_DELEAT
W02_UGECG907_ENDEND
W02_UGECG907_ENTCHNGCD
W02_UGECG907_ENTSRCECD
W02_UGECG907_ENTPHSECD
W02_UGECG907_ENTCHNGAX
```

W02_UGECG907_ENTMANGCD

W02_UGECG907_ENTMANGNM

W02_UGECG907_ENTMKELVL

EnD Sub

'*******************************************************

<<W03 Pallet Function>>

Fig. 57 is a flowchart for explaining the preparation method of Pallet Function on which the W03 Pallet-belonging Pallet Function places unit programs (Duplication Vector and Homogeneity Vector) of every Word Identifier and unit programs of every Action Operator by disregarding the process sequence.

As shown in the Fig., a check is implemented, at first, to see if 'End Condition satisfied or not' (specifically, whether '(READ-family) Command Action Vector End Flag, Tense Control Vector End Flag, (Non-READ-family) Command Action Vector End Flag and End Flag are '1' or not (step 5703), and if the End Condition is satisfied it returns to Pallet Function through 'W03 Pallet Function End' (step5703).

Next, if the End Condition is not satisfied, a check is made in the judgment box of '(READ-family) Command Action Vector End Flag' (step 570) to see if the (READ-family) Command Action Vector Activate Condition is satisfied or not (specifically, if the 'Command Action Vector End Flag' is not '1' or not). If the (READ-family) Command Action Vector Activate Condition is satisfied, a unit program group of (READ-family) Command Action Vector is activated in the process box of 'the (READ-family) Command Action Vector Activate' (step 5709).

With a unit program group of the activated (READ-family) Command Action Vectors, unit programs for every Action Operator (i.e., Command Action Vectors of File Open, File Reference) are placed by disregarding the process sequence.

Next, upon returning from the unit program group of (READ-family) Command Action Vectors, a logic of making the (READ-family) Command Action Vector into '1' is implemented in the '(READ-family) Command Action Vector End Flag Set' process box (step 5711), and then the judgment is made in the 'End' judgment box (step 5713) to see if End or not (specifically, if the (READ-family) Command Action Vector End Flag and End Flag are '1' or not).

When the End condition is not satisfied (5714), it returns to the forefront of Pallet Function, and when the End condition is satisfied, the End Flag is made into '1', for assurance, in the End Flag Set' process box (step 5715), thereby returning to the forefront of Pallet Function.

When the (READ-family) Command Action Vector Activate Condition is not satisfied, the judgment is implemented in the 'Tense Control Vector Activate Condition' judgment box (step 5717) to see the Tense Control Vector Activate Condition has been satisfied or not (specifically, if the (READ-family) Command Action Vector End Flag is '1' and also the Tense Control Vector End Flag is '1' or not), and if the Tense Control Vector Activate Condition has been satisfied, the Tense Control Vector-related unit program group is activated in the process box of 'Tense Control Vector Activate' (step 5719). In the activated Tense Control Vector-related unit program group, unit programs (Duplication Vector and Homogeneity Vector) for individual Word Identifiers are placed by disregarding the process sequence.

Next, the judgment is implemented in the 'Restart Flag Set Done' judgment box (step 5721) to see if Restart is necessary upon returning from the Tense Control Vector-related unit program group, and if it is necessary, the Tense Control Vector-related unit program group is re-activated (step 5722). If Restart is not necessary, a logic of making Tense Control Vector End Flag into '1' is implemented through 'Tense Control Vector End Flag Set' (step 5723), then the judgement is implemented in the 'End' judgment box (step 5725) to see if End or not (specifically, the (READ-family) Command Action Vector End Flag, Tense Control Vector End Flag and the End Flag are '1' or not).

When the End condition is satisfied, the End Flag is set in the 'End Flag Set' process box (step 5727), for assurance, it returns to the forefront of Pallet Function, and when the End condition is not satisfied (5726), it returns to the forefront of Pallet Function.

Next, when the Tense Control Vector Activate condition is not satisfied, the judgment is implemented in the '(non-READ-family) Command Action Vector Activate Condition' judgment box (step 5731) to see if the (non-READ-family) Command Action Vector Activate Condition has been satisfied or not (specifically, if both the (non-READ-family) Command Action Vector End Flag and the Tense Control Vector End Flag are '1' at the same time if the '(non-READ-family) Command Action Vector End Flag' is other than '1' or not). When the (non-READ-family) Command Action Vector Activate Condition has been satisfied, the (non-READ-family) Command Action Vector 's unit program group is activated in the '(non-READ-family) Command Action Vector Activate' process box. (step 5729).

With the activated (non-READ-family) Command Action Vector 's unit program group, unit programs for individual Action Operators (Work Requirement Action Vector, File Register/Modify Action Vector and Routing Action Vector) are placed by disregarding the process sequence.

Next, upon returning from the (non-READ-family) Command Action Vector's unit program group, a logic of making (non-READ-family) Command Action Vector End Flag into '1' is implemented in the '(non-READ-family) Command Action Vector End Flag Set' process box (step 5733), and *the judgment is implemented in the* 'End' judgment box (step 5735) to see if the it is End or not (specifically, if the (READ-family) Command Action Vector End Flag, Tense Control Vector End Flag, (non-READ-family) Command Action Vector Flag Set, and End Flag are all '1' or not. (non-READ-family) and also the Tense Control Vector End Flag are '1' as well as if the '(non-READ-family) Command Action Vector Activate Condition' is not '1' or not). When the (non-READ-family) Directive Action Vector Activate Condition has been satisfied, the (non-READ-family) Command Action Vector 's unit program group is activated in the ' (non-READ-family) Command Action Vector Activate' process box. (step 5729).

When the End condition is not satisfied (5736), it returns to the forefront of Pallet Function, and when the End condition is satisfied, the End Flag is made into '1', for assurance, in the 'End Flag Set' process box (step 5737), and it returns to the forefront of Pallet Function.

Listed in the following (from asterisk to asterisk) is a diagram showing a result of coding the Pallet Function to be mounted on W032 Pallet concerned with the Work related Homogeneity Map of 'Conversion Value Standard Ledger Management'.

```
'****************************************
Public Sub W03()
'< Control Flag Initialize > ·····*
 P3_INIT_FLG = ""
 P3_POP_FLG = ""
 P3_PRD_FLG = ""
 P3_YL_FLG = ""
 P3_PCH_FLG = ""
 P3_PWT_FLG = ""
 P3_PCL_FLG = ""
 P3_PRT_FLG = ""
 P3_PCR_FLG = ""
 P3_END_FLG = ""
'< Control > ·····*
Main_Chk:
'··· End Judgment ···
 If P3_END_FLG = "1" _
```

```
  Or (P3_INIT_FLG = "1" _
  AnD P3_POP_FLG = "1" _
  AnD P3_YL_FLG = "1" _
  AnD P3_CHP_FLG = "1" _
  AnD P3_PWT_FLG = "1" _
  AnD P3_PCL_FLG = "1" _
  AnD P3_PRT_FLG = "1" _
  AnD P3_PCR_FLG = "1") Then
    GoTo Main_END
 EnD If
'--- Φp – P Group (Initial Process) ---
 If P3_INIT_FLG = "" _
  AnD P3_POP_FLG = "" _
  AnD P3_PRD_FLG = "" _
  AnD P3_YL_FLG = "" _
  AnD P3_PCH_FLG = "" _
  AnD P3_PWT_FLG = "" _
  AnD P3_PCL_FLG = "" _
  AnD P3_PRT_FLG = "" _
  AnD P3_PCR_FLG = "" Then
'--------< Initial Setting Group Activate
    Call P3_INIT_PROC
'--------< Execute Done
    P3_INIT_FLG = "1"
    GoTo Main_Chk
 EnD If
```

```
'··· Open Command Action Vector Group ···
 If P3_INIT_FLG = "1" _
  AnD P3_POP_FLG = "" _
  AnD P3_PRD_FLG = "" _
  AnD P3_YL_FLG = "" _
  AnD P3_PCH_FLG = "" _
  AnD P3_PWT_FLG = "" _
  AnD P3_PCL_FLG = "" _
  AnD P3_PRT_FLG = "" _
  AnD P3_PCR_FLG = "" Then
'········< Open Command Action Vector Group Activate
    Call P_3POP_PROC
'········< ExecuteDone
    P3_POP_FLG = "1"
    GoTo Main_ChD
 EnD If
'··· READ Command Action Vector Group ···
 If P3_INIT_FLG = "1" _
  AnD P3_POP_FLG = "1" _
  AnD P3_PRD_FLG = "" _
  AnD P3_YL_FLG = "" _
  AnD P3_PCH_FLG = "" _
  AnD P3_PWT_FLG = "" _
  AnD P3_PCL_FLG = "" _
  AnD P3_PRT_FLG = "" _
  AnD P3_PCR_FLG = "" Then
```

```
'--------< READ Command Action Vector Group Activate
     Call P3_PRD_PROC
'--------< Execute Done
     P3_PRD_FLG = "1"
     GoTo Main_Chk
 EnD If
'--- Tense Control Vector Group ---
 If P3_INIT_FLG = "1" _
  AnD P3_POP_FLG = "1" _
  AnD P3_PRD_FLG = "1" _
  AnD P3_YL_FLG = "" _
  AnD P3_PCH_FLG = "" _
  AnD P3_PWT_FLG = "" _
  AnD P3_PCL_FLG = "" _
  AnD P3_PRT_FLG = "" _
  AnD P3_PCR_FLG = "" Then
'--------< Tense Control Vector Group Activate
     Call P3_YL_PROC
'--------< Execute Done
     P3_YL_FLG = "1"
     GoTo Main_Chk
 EnD If
'--- Work Requirement Action Vector Group ---
 If P3_INIT_FLG = "1" _
  AnD P3_POP_FLG = "1" _
  AnD P3_PRD_FLG = "1" _
```

```
  AnD P3_YL_FLG = "1" _
  AnD P3_PCH_FLG = "" _
  AnD P3_PWT_FLG = "" _
  AnD P3_PCL_FLG = "" _
  AnD P3_PRT_FLG = "" _
  AnD P3_PCR_FLG = "" Then
'--------< Work Requirement Action Vector Activate
    Call P3_PCH_PROC
'--------< Execute Done
    P3_PCH_FLG = "1"
    GoTo Main_Chk
 EnD If
'--- WRITE Command Action Vector Group ---
 If P3_INIT_FLG = "1" _
  AnD P3_POP_FLG = "1" _
  AnD P3_PRD_FLG = "1" _
  AnD P3_YL_FLG = "1" _
  AnD P3_PCH_FLG = "1" _
  AnD P3_PWT_FLG = "" _
  AnD P3_PCL_FLG = "" _
  AnD P3_PRT_FLG = "" _
  AnD P3_PCR_FLG = "" Then
'--------< WRITE Command Action Vector Group Activate
    Call P3_PWT_PROC
'Execute Done
    P3_PWT_FLG = "1"
```

```
    GoTo Main_Chk
  EnD If
'··· CLOSE Command Action Vector Group ···
  If P3_INIT_FLG = "1" _
   AnD P3_POP_FLG = "1" _
   AnD P3_PRD_FLG = "1" _
   AnD P3_YL_FLG = "1" _
   AnD P3_PCH_FLG = "1" _
   AnD P3_PWT_FLG = "1" _
   AnD P3_PCL_FLG = "" _
   AnD P3_PRT_FLG = "" _
   AnD P3_PCR_FLG = "" Then
'········< CLOSE Command Action Vector Group Activate
    Call P3_PCL_PROC
'········< Execute Done
    P3_PCL_FLG "1" _
    GoTo Main_Chk
  EnD If
'··· Routing Action Vector Group ···
  If P3_INIT_FLG "1" _
   AnD P3_POP_FLG = "1" _
   AnD P3_PRD_FLG = "1" _
   AnD P3_YL_FLG = "1" _
   AnD P3_PCH_FLG = "1" _
   AnD P3_PWT_FLG = "1" _
   AnD P3_PCL_FLG = "1" _
```

```
 AnD P3_PRT_FLG = "" _
 AnD P3_PCR_FLG = "" Then
'--------< Routing Action Vector Group Activate
    Call P3_PRT_PROC
'--------< Execute Done
    P3_PRT_FLG "1" _
    GoTo Main_Chk
 EnD If
'--------< Structural Adjustment Action Vector Group ···
 If P3_INIT_FLAG = "1" _
  AnD P3_POP_FLG = "1" _
  AnD P3_PRD_FLG = "1" _
  AnD P3_YL_FLG = "1" _
  AnD P3_PCH_FLG = "1" _
  AnD P3_PWT_FLG = "1" _
  AnD P3_PCL_FLG = "1" _
  AnD P3_PRT_FLG = "1" _
  AnD P3_PCR_FLG = "" Then
'--------< Structural Adjustment Action Vector Group Activate
    Call P3_PCR_PROC
'--------< Execute Done
    P3_PCR_FLG "1"
    GoTo Main_Chk
 EnD If
'··· All End Check ···
 If P3_INIT_FLAG "1" _
```

```
        AnD P3_POP_FLG = "1" _
        AnD P3_PRD_FLG = "1" _
        AnD P3_YL_FLG = "1" _
        AnD P3_PCH_FLG = "1" _
        AnD P3_PWT_FLG = "1" _
        AnD P3_PCL_FLG = "1" _
        AnD P3_PRT_FLG = "1" _
        AnD P3_PCR_FLG = "1" Then
          P3_END_FLG "1"
          GoTo Main_Chk
         EnD If
        Main_EnD:
        EnD Sub
'* W03 Initial Setting Group
Public Sub P3_INIT_PROC()
  ' === Message-WFL Area Initial Setting
    WFL_UGECG907*RD_FACTCD = ""
    WFL_UGECG907*RD_QURYCD = ""
    WFL_UGECG907*RD_CHNGCD = ""
    WFL_UGECG907*RD_SRCECD = ""
    WFL_UGECG907*RD_PHSECD = ""
    WFL_UGECG907*RD_CHNGAX = ""
    WFL_UGECG907*RD_MANGCD = ""
    WFL_UGECG907*RD_MANGNM = ""
    WFL_UGECG907*RD_MDELVL = ""
    WFL_UGECG907*RD_SELLINENO = ""
```

```
WFL_UGECG907*RD_SELOBJ = ""
WFL_UGECG907*RD_SELCCM = ""
WFL_UGECG907*RD_CNTCHNGCD = ""
WFL_UGECG907*RD_CNTSRCECD = ""
WFL_UGECG907*RD_CNTPHSECD = ""
WFL_UGECG907*RD_CNTCHNGAX = ""
WFL_UGECG907*RD_CNTMANGCD = ""
WFL_UGECG907*RD_CNTMANGNM = ""
WFL_UGECG907*RD_CNTMKELVL = ""
WFL_UGECG907*RD_APLLINENO = ""
WFL_UGECG907*RD_SELCMN = ""
WFL_UGECG907*RD_ENTORY = ""
WFL_UGECG907*RD_CHANGE = ""
WFL_UGECG907*RD_DELEAT = ""
WFL_UGECG907*RD_ENDEND = ""
WFL_UGECG907*RD_ENTCHNGCD = ""
WFL_UGECG907*RD_ENTSRCECD = ""
WFL_UGECG907*RD_ENTPHSECD = ""
WFL_UGECG907*RD_ENTCHNGAX = ""
WFL_UGECG907*RD_ENTMANGCD = ""
WFL_UGECG907*RD_ENTMANGNM = ""
WFL_UGECG907*RD_ENTMKELVL = ""
' Restart Counter Initial Setting
'==== The number of times of Restart of Screen Word <CNT>
W03__UGECG907_FACTCD_CNT = 0
W03__UGECG907_QURYCM_CNT = 0
```

W03__UGECG907_CHNGCD_CNT(15) = 0

W03__UGECG907_SRCECD_CNT(15) = 0

W03_UGECG907_PHSECD_CNT(15) = 0

W03_UGECG907_CHNGAX_CNT(15) = 0

W03_UGECG907_MANGCD_CNT(15) = 0

W03_UGECG907_MANGNM_CNT(15) = 0

W03_UGECG907_MKELVL_CNT(15) = 0

W03_UGECG907_SELLINE0_CNT(15) = 0

W3_UGECG907_SELOBJ_CNT = 0

W03_UGECG907_SELCCM = 0

W03_UGECG907_CNTCHNGCD(5) = 0

W03_UGECG907_CNTSRCECD(5) = 0

W03_UGECG907_CNTPHSECD(5) = 0

W03_UGECG907_CNTCHNGAX(5) = 0

W03_UGECG907_CNTMANGCD(5) = 0

W03_UGECG907_CNTMANGNM(5) = 0

W03_UGECG907_CNTMKELVL(5) = 0

W03_UGECG907_APLLINENO(5) = 0

W03_UGECG907_SELCMN = 0

W03_UGECG907_ENTORY = 0

W03_UGECG907_CHANGE = 0

W03_UGECG907_DELEAT = 0

W03_UGECG907_ENDEND = 0

W03_UGECG907_ENTCHNGCD = 0

W03_UGECG907_ENTSRCECD = 0

W03_UGECG907_ENTPHSECD = 0

```
  W03_UGECG907_ENTCHNGAX = 0
  W03_UGECG907_ENTMANGCD = 0
  W03_UGECG907_ENTMANGNM = 0
  W03_UGECG907_ENTMKELVL = 0
'===== The number of times of Restart of WRITE-DB Word <CNT>
'===== The number of times of Restart of UPDATE-DB Word <CNT>
'===== The number of times of Restart of Voucher Word <CNT>
EnD Sub
'* W03 Open Command Action Vector (P) Activate
Public Sub P3_POP_PROC()
EnD Sub
'* W03 Message RECEIVE Command Action Vector (P) Activate
Public Sub P3_PRD_PROC()
 Call P3_UGECG907_QURYCM_RECV
 Call P3_UGECG907_SELCM_RECV
 Call P3_UGECG907_APLCM_RECV
 Call P3_UGECG907_ENTCM_RECV
EnD Sub
'* W03 Tense Control Vector (Y&L) Activate
Public Sub P3_YL_PROC()
EnD Sub
'* W03 Work Requirement Action Vector (P) Activate
  'Duplication Vector Activate
    Call Y3_UGECD907_FACTCD
    Call Y3_UGECD907_QURYCM
    For N = 0 To 15-1
```

```
    Call Y3_UGECG907_CHNGCD
    Call Y3_UGECG907_SRCECD
    Call Y3_UGECG907_PHSECD
    Call Y3_UGECG907_CHNGAX
    Call Y3_UGECG907_MANGCD
    Call Y3_UGECG907_MANGNM
    Call Y3_UGECG907_MKELVL
    Call Y3_UGECG907_SELLINENO
  Next
Call Y3_UGECG907_SELOBJ
Call Y3_UGECG907_SELCCM
For N = 0 To 5-1
  Call Y3_UGECG907_CNTCHNGCD
  Call Y3_UGECG907_CNTSRCECD
  Call Y3_UGECG907_CNTPHSECD
  Call Y3_UGECG907_CNTCHNGAX
  Call Y3_UGECG907_CNTMANGCD
  Call Y3_UGECG907_CNTMANGNM
  Call Y3_UGECG907_CNTMKELVL
  Call Y3_UGECG907_APLLINENO
Next
  Call Y3_UGECG907_SELCMN
  Call Y3_UGECG907_ENTORY
  Call Y3_UGECG907_CHANGE
  Call Y3_UGECG907_DELEAT
  Call Y3_UGECG907_ENDEND
```

```
Call Y3_UGECG907_ENTCHNGCD
Call Y3_UGECG907_ENTSRCECD
Call Y3_UGECG907_ENTPHSECD
Call Y3_UGECG907_ENTCHNGAX
Call Y3_UGECG907_ENTMANGCD
Call Y3_UGECG907_ENTMANGNM
Call Y3_UGECG907_ENTMKELVL
'Homogeneity Vector Activate
Do
W03_RECALL_FLG = False
Call L3_UGECG907_FACTCD
Call L3_UGECG907_QURYCM
For N = 0 To 15-1
Call L3_UGECG907_CHNGCD
Call L3_UGECG907_SRCECD
Call L3_UGECG907_PHSECD
Call L3_UGECG907_CHNGAX
Call L3_UGECG907_MANGCD
Call L3_UGECG907_MANGNM
Call L3_UGECG907_MKELVL
Call L3_UGECG907_SELLINENO
NEXT
Call L3_UGECG907_SELOBJ
Call L3_UGECG907_SELCCM
For N = 0 To 5-1
Call L3_UGECG907_CNTCHNGCD
```

```
        Call L3_UGECG907_CNTSRCECD
        Call L3_UGECG907_CNTPHSECD
        Call L3_UGECG907_CNTCHNGAX
        Call L3_UGECG907_CNTMANGCD
        Call L3_UGECG907_CNTMANGNM
        Call L3_UGECG907_CNTMKELVL
        Call L3_UGECG907_APLLINENO
      Next
        Call L3_UGECG907_SELCMN
        Call L3_UGECG907_ENTORY
        Call L3_UGECG907_CHANGE
        Call L3_UGECG907_DELEAT
        Call L3_UGECG907_ENDEND
        Call L3_UGECG907_ENTCHNGCD
        Call L3_UGECG907_ENTSRCECD
        Call L3_UGECG907_ENTPHSECD
        Call L3_UGECG907_ENTCHNGAX
        Call L3_UGECG907_ENTMANGCD
        Call L3_UGECG907_ENTMANGNM
        Call L3_UGECG907_ENTMKELVL
    Loop Until W03_RECALL_FLG = False
Public Sub P3_PCH_PROC()
'
EnD Sub
'* W03 Message SEND Command Action Vector (P) Activate
Public Sub P3_PWP_PROC()
```

```
  Call P3_UGECG907_QURYCM_SEND
  Call P3_UGECG907_SELCM_SEND
  Call P3_UGECG907_APLCM_SEND
  Call P3_UGECG907_ENT CM_SEND
EnD Sub
'* W03 CLOSE Command Action vector (P) Activate
Public Sub P3_PCL_PROC()
'
EnD Sub
'* W03 Routing Action Vector (P) Activate
Public Sub P3_PRT_PROC()
  Call P3_UGECG907_QURYCM_OKRT
  Call P3_UGECG907_SELCM_OKRT
  Call P3_UGECG907_APLCM_OKRT
  Call P3_UGECG907_ENTCM_OKRT
  Call P3_UGECG907_QURYCM_NGRT
  Call P3_UGECG907_SELCM_NGRT
  Call P3_UGECG907_APLCM_NGRT
  Call P3_UGECG907_ENTCM_NGRT
EnD Sub
'* W03 Structural Adjustment Action vector (P) Activate
Public Sub P3-PCR_PROC()
EnD Sub
'*************************************************
```

<<W04 Pallet Function>>

Fig. 59, as already explained, is a flowchart for explaining the preparation method of Pallet Function on which the W04 Pallet-belonging Pallet Function places unit programs (Duplication Vector and Homogeneity Vector) of every Word Identifier and unit programs of every Action Operator (Action Vector) by disregarding the process sequence.

As shown by the Fig., in the W04 Pallet-belonging Pallet Function, the judgment is implemented, at first, to see if the End Condition satisfied or not (specifically, whether Tense Control Vector End Flag, Message-related Action Vector End Flag, and End Flag are '1' or not) (Non-READ-family) Command Action Vector End Flag and End Flag are '1' or not (step 5903), and when the End Condition has been satisfied, it returns to Pallet Chain Function through 'W04 Pallet Function End' (step 5905).

When the End Condition has not been satisfied, the judgment is implemented in the 'Tense Control Vector Activate Condition' judgment box (step 5907) to see if the Tense Control Vector Activate Condition has been satisfied or not (specifically, if the Tense Control Vector End Flag is other than '1' or not), and if Tense Control Vector Activate Condition is satisfied, the Tense Control Vector-related unit program group is activated in the 'Tense Control Vector Activate' process box (step 5909). In the activated Tense Control Vector-related unit program group, unit programs of every Word Identifier (Duplication Vector and Homogeneity Vector) are placed by disregarding the process sequence.

Next, upon returning from the Tense Control Vector-related unit program group, the judgment is implemented in the 'Restart Flag Set Done' judgment box (step 5911) to see if Restart is necessary or not, and when Restart is necessary, the Tense Control Vector-related unit program group is re-activated (5912), but when Restart is not necessary, a logic of making the Tense Control Vector End Flag into '1' is implemented in the 'Tense Control Vector End Flag Set' (step 5913) and then the judgment is implemented in the 'End' judgment box (step 5915) to see if End or not (specifically, if Tense Control Vector End Flag, Message-related Action Vector End Flag, and End Flag are '1' or not).

When the End condition is not satisfied (5916), it returns to the forefront of Pallet Function, and when the End condition is satisfied, the End Flag is set, for assurance, in the 'End Flag Set' process box of (step 5917), then returns to the forefront of Pallet Function.

Next, when the Tense Control Vector Activate condition is not satisfied, a check is implemented in the '(Message-related) Command Action Vector Activate Condition' judgment box (step 5919) to see if the (Message-related) Command Action Vector Activate Condition has been satisfied or not (concretely, if the Tense Control Vector End Flag is '1' and the (Message-related) Command Action Vector End Flag is not '1').

With the activated (Message-related) Command Action Vector's unit program group, unit programs for individual Action Operators (Message File Open Command Action Vector, Work Requirement Action Vector to determine message number concerned with File-related Words and Action Vectors which are placed on W03 Pallet, Work Requirement Action Vector for Message Edit, and Command Action Vector for Message File Close) are placed in by disregarding the process sequence.

Next, upon returning from the (Message-related) Command Action Vector's unit program group, a logic of making (Message-related) Command Action Vector End Flag into '1' is implemented in the '(Message-related) Commnad Action Vector End Flag Set' process box (step 5923), and the judgment is implemented in the 'End' judgment box (step 5925) to see if it is End or not (specifically, if the Tense Control Vector End Flag, the (Message-related) Command Action Vector End Flag, and End Flag are all '1' or not.

When the End condition is not satisfied (5926), it returns to the forefront of Pallet Function, and when the End condition is satisfied, the End Flag is set into '1', for assurance, in the 'End Flag Set' process box (step 5927), then returns to the forefront of Pallet Function.

The following (from asterisk to asterisk) is a result of coding Pallet Function mounted on W04 Pallet concerned with the name <Conversion Value Standard Ledger Management Screen> and the Definitive Identifier <UGECG907>.

```
'****************************************************************
Public Sub UGECG907W04()
'<Control Flag Initialize> -----*
P4_INIT_FLG = ""
P4_YL_FLG = ""
P4_PCH_FLG = ""
P4_PRT_FLG = ""
```

```
  P4_PCR_FLG = ""
  P4_END_FLG = ""
'<Control> ·····*
Main_Chk:
'··· End Judgment ···
  If P4_END_FLG = "1" _
   Or (P4_INIT_FLG   "1" _
   AnD P4_L_FLG = "1" _
   AnD P4_PCH_FLG = "1" _
   AnD P4_PRT_FLG = "1" _
   AnD P4_PCR_FLG = "1" Then
     GoTo Main_EnD
   EnD If
'··· Φp-P group (initial process) ···
  If P4_INIT_FLG = "" _
   AnD P4_YL_FLG = "1" _
   AnD P4_PCH_FLG = "1" _
   AnD P4_PRT_FLG = "1" _
   AnD P4_PCR_FLG = "1" Then
' ·········<Initial Setting Group Activate
      Call P4_INIT_PROC
' ·········< Execute Done
      P4_INIT_FLG = "1"
      GoTo Main_Chk
  EnD If
'··· YL group ···
```

```
If P4_INIT·FLG = "1" _
AnD P2_YL_FLG = "" _
AnD P2_PCH_FLG = "" _
AnD P2_PRT_FLG = "" _
AnD P2_PCR_FLG = "" Then
'.........<Homogeneity Vector Group Activate
   Call P4_YL_PROC
'........< Execute Done
   P4_YL_FLG = "1"
   GoTo Main_Chk
EnD If
'··· Work Requirement Action Vector Group ···
If P4_INIT_FLG = "1" _
 AnD P4_YL_FLG = "1" _
 AnD P4_PCH_FLG = "1" _
 AnD P4_PRT_FLG = "1" _
 AnD P4_PCR_FLG = "1" Then
'........< Work Requirement Action Vector Group Activate
    Call P4_PCH_PROC
'........< Execute Done
    P4_PCH_FLG = "1"
    GoTo Main_Chk
EnD If
'··· Routing Action vector Group ···
If P4_INIT_FLG = "1" _
 AnD P4_YL_FLG = "1" _
```

```
  AnD P4_PCH_FLG = "1" _
  AnD P4_PRT_FLG = "" _
  AnD P4_PCR_FLG = "" Then
'--------< Routing Action vector Group Activate
    Call P4_PRT_PROC
'--------< Execute Done
    P4_PRT_FLG = "1"
    GoTo Main_Chk
 EnD If
'--- Structural Adjustment Action Vector Group ---
 If P4_INIT_FLG "1" _
  AnD P4_YL_FLG "1" _
  AnD P4_PCH_FLG "1" _
  AnD P4_PRT_FLG "1" _
  AnD P4_PCR_FLG "" Then
'--------< Structural Adjustment Action Vector Group Activate
    Call P4_PCR_PROC
'--------< Execute Done
    P4_PCR_FLG "1"
    GoTo Main_Chk
 EnD If
'--- All End Check ---
 If P4_INIT_FLG = "1" _
  AnD P4_YL_FLG = "1" _
  AnD P4_PCH_FLG = "1" _
  AnD P4_PRT_FLG = "1" _
```

```
   AnD P4_PCR_FLG = "1" _ Then
'---------< End Done
        P4_END_FLG = "1"
        GoTo Mai9n_Chk
  EnD If
Main_EnD:
EnD Sub
'* W04 Initial Process Group
Public Sub P4_INIT_PROC()
'=== Action Vector-Execute Done Flag
  W04_ME_PRT1_FLG = ""
  W04_ME_PCR1_FLG = ""
'=== Action Vector-Refusal Flag <Non>
  W04_ME_PRT1_Non = False
  W04_ME_PCR1_Non = False
EnD Sub
'W04 Tense Control Vector (Y&L) Activate
Public Sub P4_YL_PROC()
'Duplication Vector Activate
     Call Y4_UGECG907_FACTCD
     Call Y4_UGECG907_QURYCM
     For N = 0 To 15-1
       Call Y4_ UGECG907_CHNGCD
       Call Y4_UGECG907_SRCECD
       Call Y4_UGECG907_PHSECD
       Call Y4_UGECG907_CHNGAX
```

```
Call L3_UGECG907_MANGCD
Call Y4_UGECG907_MANGNM
Call Y4_UGECG907_MKELVL
Call Y4_UGECG907_SELLINENO
NEXT
Call Y4_UGECG907_SELOBJ
Call Y4_UGECG907_SELCCM
For N = 0 To 5-1
Call Y4_UGECG907_CNTCHNGCD
Call Y4_UGECG907_CNTSRCECD
Call Y4_UGECG907_CNTPHSECD
Call L3_UGECG907_CNTCHNGAX
Call Y4_UGECG907_CNTMANGCD
Call Y4_UGECG907_CNTMANGNM
Call Y4_UGECG907_CNTMKELVL
Call Y4_UGECG907_APLLINENO
Next
Call Y4_UGECG907_SELCMN
Call Y4_UGECG907_ENTORY
Call Y4_UGECG907_CHANGE
Call Y4_UGECG907_DELEAT
Call Y4_UGECG907_ENDEND
Call Y4_UGECG907_ENTCHNGCD
Call Y4_UGECG907_ENTSRCECD
Call Y4_UGECG907_ENTPHSECD
Call Y4_UGECG907_ENTCHNGAX
```

```
Call Y4_UGECG907_ENTMANGCD
Call Y4_UGECG907_ENTMANGNM
Call Y4_UGECG907_ENTMKELVL
'Homogeneity Vector Activate
Do
W04_RECALL_FLG = False
Call L4_UGECG907_FACTCD
Call L4_UGECG907_QURYCM
For N = 0 To 15-1
Call L4_UGECG907_CHNGCD
Call L4_UGECG907_SRCECD
Call L4_UGECG907_PHSECD
Call L4_UGECG907_CHNGAX
Call L4_UGECG907_MANGCD
Call L4_UGECG907_MANGNM
Call L4_UGECG907_MKELVL
Call L4_UGECG907_SELLINENO
NEXT
Call L4_UGECG907_SELOBJ
Call L4_UGECG907_SELCCM
For N = 0 To 5-1
Call L4_UGECG907_CNTCHNGCD
Call L4_UGECG907_CNTSRCECD
Call L4_UGECG907_CNTPHSECD
Call L4_UGECG907_CNTCHNGAX
Call L4_UGECG907_CNTMANGCD
```

```
    Call L4_UGECG907_CNTMANGNM
    Call L4_UGECG907_CNTMKELVL
    Call L4_UGECG907_APLLINENO
   Next
    Call L4_UGECG907_SELCMN
    Call L4_UGECG907_ENTORY
    Call L4_UGECG907_CHANGE
    Call L4_UGECG907_DELEAT
    Call L4_UGECG907_ENDEND
    Call L4_UGECG907_ENTCHNGCD
    Call L4_UGECG907_ENTSRCECD
    Call L4_UGECG907_ENTPHSECD
    Call L4_UGECG907_ENTCHNGAX
    Call L4_UGECG907_ENTMANGCD
    Call L4_UGECG907_ENTMANGNM
    Call L4_UGECG907_ENTMKELVL
  Loop Until W04_RECALL_FLG = False
EnD Sub
'* W04 Work Requirement Action Vector (P) Activate
Public Sub P4_PCH_PROC()
  CALL P4_FMSGFLOPEN
  CALL P4_FFALSECG
  CALL P4_FMSGREAD
  CALL P4_MSGTXTED
  CALL P4_FMSCLSE
EnD Sub
```

```
'*************************************************
'* W04 Routing Action Vector (P) Activate
'*************************************************
Public Sub P4_PRT_PROC()
  CALL P4_UGECG907RT
EnD Sub
'*************************************************
'* W04 Structural Adjustment Action Vector (P) Activate
'*************************************************
Public Sub P4_PCR_PROC()
  CALL P4_PCH1
  CALL P4_PCH2
EnD Sub
'*************************************************
```

<Preparation of Pallet Chain Function (step 6411)>

The preparation of Pallet Chain Function is a work to create only one program per system, composed of a series of codes, which realize the reduction into the computer space of the Logical Structure of the Idea Rule in Providence of Existence called 'Pallet Chain Function' that establishes synchronization by means of functions of Activate Control of Pallets created and functions of Data Send/Receive with the medium of Screen.

Fig. 54 is a flowchart showing a logical structure of the Pallet Chain Function. As shown by the Fig., the Program Identifier Φ0 (5401) part of Pallet Chain Function is the forefront codes of the program composed of the codes of Pallet Chain Function Φ0 of Scenario Function T0 which takes medium of Screen as Base Definitive, and it means that a computer starts as indicated by these codes. For example, a case of preparation of a series of codes by using the above logical Visual Basic (abbreviated as VB) under the control of OS 'MS-DOS' is explained as an example by using Fig. 95 to Fig. 97.

First, the activation of the system starts by commanding system operation with clicking a mouse for the 'shortcut' of the related system which is registered in the OS and is displayed on the screen of a personal computer. Thereafter, by the codes Call Sub Main (9501) defined in the VB product, the codes Private Sub Main (9503) in the forefront of Pallet Chain Function Φ0 starts to operate.

In the 'Private Sub Main' (9503) which has started to operate, a Send information to be displayed at first on the Screen just after the system start, the codes of 'CTRL.NxtPltID = PltID_Entry' (9505) start to operate which are to fill Pallet Identifier that has been set in advance in the data area PltID_Entry identified by an identifier of 'Entry'. Hereupon, the CTRL.NxtPltID is an identifier of the data field of a checking destination of the logic of 'Send Information Determination' (step 5403).

Also, into the data area PltID_Entry of the 'Entry' identifier, a W04 Pallet's identifier of the screen of ''Menu' is normally registered.

Next, the 'CTRL.Cnro_Cain = "1"' codes (9507) operate so as not to need Scenario Function because it is an initial operation. Thereafter, as to the original logical part of Pallet Chain Function, the operation is indicated by the 'Call T0' codes (9509). The codes mentioned above correspond to the part of the Program Identifier Φ0 (5401).

Next, the original logical part of Pallet Chain Function (9513) starts to operate (9517), and the 'SEND Information Determine' (step 5403) is implemented at first. The determination of SEND Information means that it is semantic quality concerned with Consciousness Unit-Link in the Providence of Existence, and when it is reduced into the computer space, it is a Medium Identifier to which data code to be displayed next on Screen belongs and W04 Pallet Identifier concerned with it.

Therefore, the 'SEND Information Determine' (step 5403) logic checks (9519) the presence of the Screen Identifier displayed next in the destination data field (CTRL.NxtScrnID), and if it is present, by setting the content of the data field having recorded the next Screen Identifier is set (9523), with (CTRL.NxtScrnID) as a data field (CTRL. CurScrnID) to record the current Screen Identifier, thereby the SEND Information.

Thereafter, by the SEND Function' (step 5421), the content of the data field concerned with a Word belonging to the Screen is sent (Call NextScrnShow) to Screen (9527). Additionally, in advance of the determination of this SEND Information, the content of the data field (CTRL.CurScrnID) recording the current Screen Identifier is copied and evacuated into the data field (CTRL.PrvScrnID) recording Screen Identifier of just before (9521), as well as clearing the data field (CTRL.NxtScrnID) recording the next Screen Identifier as after adjustment (9525).

Additionally, the next Screen Identifier is set in 'Routing Action Vectors' to be mounted on W04 Pallet, together with the next Activate Pallet Identifier and 'Scenario Chain Required or not', so the SEND function (step 5421) will operate only after the W04 Pallet operation. Next, the 'System Blockade' check is implemented (step 5405). That is, the check is implemented concerning the content of the data field (CTRL.NxtPltID) recording the Next Activate Pallet Identifier, and if the content is "System Blockade (EnD)', the 'System Blockade' (step 5407) is implemented.

```
'*******************************************
'--- System Blockade
If CTRL.NxtPltID = "EnD" Then
   EnD
EnD If
'*******************************************
```

If the content of the data field (CTRL.NxtPltID) recording the Next Activate Pallet Identifier is not 'System Blockade (EnD)', the 'Within-WT Continue' check is implemented (step 5405). The 'Within-WT Continue' check means a check querying if the process begins from a new Deuteronomy in the Providence of Existence, and in case the Providence of Existence is reduced into the computer space, it is a check, for example, whether to select a new work or function by returning to Menu.

That is, a check is implemented on the content of the data field (CTRL.NxtPltID) recording the Next Activate Pallet Identifier to find if the content is Menu or not. That is, if it is coincident to the content of the data field (PltID_Entry) recording the 'Menu Screen Identifier', the Within-WT Continue is regarded as False and the 'related Within-WT All Pallets Set' (step 5411) is implemented. Further, the 'related Within-WT All Pallets Set' (step 5411) means to make semantic quality assumed by Pallets managed in the Menu Screen upon the occurrence of needs, and a logic dependent on the OS applied is realized. The codes of this becomes as follows:

```
'******************************************
If CTRL.NxtPltID = PltID_Entry Then
'Corresponding Within-WT All Pallets Set'
EnD If
'******************************************
```

Next, when the 'Within-WT Continue' is True, the 'Scenario Chain Required or Not' check is implemented (step 5413). The 'Scenario Chain Required' check is a logic to imitate the disintegration in the Providence of Existence, and when the Providence of Existence is reduced into the computer space, it corresponds to the initialization of the data field which imitates a destination inducing semantic quality. That is, a check is implemented on the content of the data field (CTRL.Cnro_Cain) recording Scenario Chain Required or Not, and if the content is Not ('1'), the area initialization of all data fields identified by Word Identifier (step 5417). This is expressed in codes as follows:

```
'******************************************
' Word Area Clear when Scenario Chain not Required,
If CTRL.Cnro_Cain = "1" Then


   Call Area_Clear
 EnD If
 '******************************************
```

If the content of the data field recording Scenario Chain Required or Not is 'Required', the 'corresponding W04 Pallet Activate' (step 5419) is then implemented. This is expressed in codes as shown by Fig. 96(a).

That is, by setting the content of the data field recording the next 'Pallet Identifier' with (CTRL.NxtPltID) as a data field of recording the current Screen Identifier (CTRL.CurPltID) (9603), the next-to-activate 'Pallet Identifier' is determined, thereby activating (9607) the corresponding Pallet (Call PALLETCall).

In advance of determining the next-to-activate Pallet, the content of the data field (CTRL.CurPltID) recording the current Pallet Identifier is copied and evacuated (9601) into the data field (CTRL.PrvPltID) recording a just-before Pallet Identifier, as well as clearing the data field (CTRL.NxtPltID) recording the next Pallet Identifier as after adjustment (9605).

Additionally, the next Pallet Identifier is set in 'Routing Action Vectors' to be mounted on each Pallet and as well as on Homogeneity Vectors of Word of Operation Key (or Direction Command) to be mounted on W02 Pallet, together with the 'Scenario Chain Required or Not' (step 5413).

After the end of the 'corresponding W04 Pallet Activate' (step 5419) (9609), data code is sent to Screen, which was edited in W04 Pallet with 'SEND Function' (step 5421). That is, with the (Call NextScreenShow) which was made into codes inside the logic of the 'SEND Information Determine' (step 5403), it is sent to a Medium identified by Screen Identifier which is appointed by the Routing Action Vector inside W04 Pallet and embodied as existence phenomenon.

Next, the synchronization is intended by a person who recognized the existence phenomenon (step 5423) and input operation is implemented (step 5424). That is, the input of data code is implemented into a data field belonging to Screen, then Operation Key (or Direction Command) is depressed.

That is, by clicking the 'Direction Command' of the corresponding Screen with a mouse, the codes (9503) of 'Private Sub T0' which is the original logical part of Pallet Chain Function Φ0 is operated by the 'Call T0' codes defined in the VB product shown in Fig. 96(b), and the RECEIVE Function' (step 5427) is implemented. And, steps hereafter, that is, the 'RECEIVE Normal' (Step 5429) check is implemented by the codes 'On Error GoTo T0ERROR (9515). The 'W02 Pallet Activate' (step 5431) (9701), the 'W03 Pallet' check (step 5433) (9703), and the 'W03 Pallet Activate' (step 5435) (9705) are implemented by the codes shown in Fig. 97.

<Scenario Function T1>

As already explained, the Scenario Function T1 is one element of the Independent Variable of W03 Pallet Function Φp(k,3) of the Scenario Function T0 expressed by the following expression, and it is also a function to determine a software. Its independent variable is Definitive Identifier f which identifies final object File (including Printouts).

$$T0 = \Phi 0 \; (+ \{\Phi p \; \{ \qquad , L2(k, i) , P2(j)\} \}k$$

$$+ \Phi p \; \{Y3(k,i), L3(k,i), P3(j), T1(f)\}$$

$$+ \{\Phi p \; \{Y4(k,i), L4(k,i), P4(j) \}\} k))$$

The 'Scenario Function T1' is additionally composed of the elements expressed by the following expression.

$$T1(f) = \Phi 1(\{\Phi p(rf, 2) \; \{ \qquad , L2(r, i) , P2(r, j), P2(j)\}\} r$$

$$+ \Phi p(rf, 3) \; \{Y3(r, i) , L3(r, i) , L3(f, i) , P3(j)\}\}$$

$$+ \Phi p(fr, 2) \; \{Y3(f, i), L4(f, j) , P4(f, j), P4(j)\}\} f)$$

Hereupon,

- The L2(r, i) indicates Homogeneity Vector on W02 Pallet of Word i belonging to Reference File r.
- The P2(r) indicates Action Vector of W02 Pallet concerned with identifier r which identifies Reference File.
- The Φp(r,2) {(L2(r,i), P2(r) ) corresponds to W02 Pallet of Reference File Identifier r.
- The L3(r,i) indicates Homogeneity Vector on W03 Pallet of Word Identifier i belonging to Reference File r.
- The L3(f,i) indicates Homogeneity Vector on W03 Pallet of Word Identifier i belonging to Object File f.
- The P3(j) indicates Action Vector corresponding to Operator j on W03 Pallet.
- The Φp(rf, 3) {L3(r, i) , L3(f, i), P3(j) } corresponds to W03 Pallet.
- The L4(f,i) indicates Homogeneity Vector on W04 Pallet of Word Identifier i belonging to Object File f.
- The P4(f) indicates Action Vector of W04 Pallet concerned with identifier f which identifies Final Object File.
- The Φp(f, 4) {L4(f, j) , P4(f)) } corresponds to W04 Pallet of Object File Identifier f.
- W04 Pallet is prepared for every Object File Identifier f.
- W02 Pallet is prepared for every Reference File Identifier r.
- W03 Pallet and T1(f) is prepared only one for every Object File Identifier.

Scenario Function T0 is a software determination function against Definitive taking medium of Screen medium as its base. In contrast, Scenario Function T1 is a software determination function against Definitive taking medium of File or Printouts as its base.

[Difference and mutual relation between Scenario Function T1 and Scenario Function T0]

A meaning is resulted from human's recognition / awareness of the natural and social phenomena (the 'meaning' herein called means a state of recognition / awareness in the depths of consciousness just before it is embodied as words and conduct, that is, speech and behavior. In this sense, the present invention grasps that 'a meaning is an invisible existence'.), and when the range of humans using aimed software and their conduct are limited, software means to be a scheme which controls, by means of a computer, information that is an object of recognition to satisfy the 'meaning' which is to be recognized / perceived by the humans in that limited range.

Therefore, information that is an object of recognition takes a premise that it is existent on media such as Screen and Printouts that are visually and directly recognizable by humans.

Humans are a living body, and in this sense, a meaning resulted from recognition / awareness of information that is an object of recognition shall be embodied as speech and behavior, and the speech and behavior shall become information as an object of new recognition. Therefore, it may as well be said that the scheme of recognition / awareness by itself that induces a meaning as an origin inducing human's speech and behavior is a software itself.

This context becomes as follows if explained by using Fig. 98.

Fig. 98 is a diagram which corresponds the recognition / awareness scheme inducing a meaning in the concept of Pallet.

That is, a clue to activate the recognition / awareness scheme inducing a meaning is an appearance of information that is an object of recognition (software or humans: 9801), and the recognition /awareness scheme starts to operate (human's perception: 9803). Next, following the recognition / awareness (human's recognition /awareness: 9805) and the materialization of meaning into speech and behavior as a result of the operation of the recognition / awareness scheme, the recognition / awareness scheme starts to operate (human's perception: 9809), and it leads to the recognition /awareness (software or humans: 9811). This cycle shall be repeated continuously.

Scenario Function T0 is nothing but a recognition / awareness scheme that induces a meaning when that human's perception and conduct is a base of the clue activating recognition / awareness for inducing a meaning, and it is a function to determine software when that the aforementioned is regarded as software. That is, in case of an information processing system, human's perception and conduct requires medium of Screen as an intermediary, so it is called 'Scenario Function T0' in this instance.

On the other hand, in case of the recognition / awareness scheme (9811) which started to operate with clues of human's perception and conduct, it is regarded as a system in which a cognitive action is working based on the memorized information that was perceived at that point, among the memorized information. That is, the meaning-inducement recognition / awareness scheme (9811) can be regarded as an action of '9811a→9811b→9811c' taking a clue of the memorized information that could be perceived at that point.

The meaning-inducement recognition / awareness scheme composed of the '9811a→9811b→9811c' based on this memorized information is called 'Scenario Function T1'. That is, contrary to that Scenario Function T0 takes a premise of the '9801→9803→9805→9807→9809 → 9811' with clues of human's perception and conduct, Scenario Function T1 targets software which takes a premise of the '9811a→ 9811b→9811c' based on the information memorized at that point, that is, medium memorizing information of File (in case of information processing system), without clues of human's perception and conduct.

Fig. 99 is a diagram for conceptually explaining the relation between the above-explained T0 and T1.

The T0's W03 Pallet of the Fig. (9901), as shown in Fig. 100, indicates that it is Scenario Function T1 10003 in which W03 Pallet 10001 was corresponded to as a new Synchronous Structure.

<<T1's W02 Action Vector>>

Various points of the logical structure of the principle theoretical base possessed by the 'T1's W02 Action Vector' are as shown in Fig. 101.

The 'T1's W02 Action Vector' P2(r) is one element consisting of Scenario Function T1 expressed by the following expression, and it is a function to determine software, thereby disregarding its business operation, its application field, its programming language, and its installment environment. Its Independent Variable is only the 'Action Operator' r which identifies Reference File.

$$T1(f) = \Phi 1(\{\Phi p(rf, 2) \{\quad , L2(r, i) , P2(r, j) , P2(j)\}\} r$$
$$+ \Phi p(rf, 3) \{Y3(r, i) , L3(r, i) , L3(f, i), P3(j)\}$$
$$+ \Phi p(fr, 4) \{Y3(f, i) , L4(f, j), P4(f, j), P4(j)\}\} f)$$

What is called a Software herein generally means the 'logic of requirements' and the 'logic of programs composed of codes', for example, indicating what kind of data code should be attached to the data field identified by Word Identifier i and how to embody it into medium of File identified by Definitive Identifier. That is, Scenario Function T1 is a function which determines the requirement and codes of programs simultaneously,

The flowchart shown in Fig. 101 is a logical structure of the function P2(r) of the 'T1's W02 Action Vector'.

If the P2(r) (10102) in the flowchart is expressed as a Program Template in a programming language, for example, COBOL, it becomes as follows:

```
P2-@%M@-@%J@-SEC SECTION.
P2-@%M@-@%J@-SEC-START.
```

The '@%M@' in the Program Template is the independent variable part of Definitive Identifier M, and the '@%j@' is the independent variable part of Action Operator j. Hereupon, the Definitive Identifier M is univocally determined as Definitive Identifier concerned with Logical Record which identifies media targeted operation in case of Command Action Vector.

On the other hand, in case of Routing Action Vector, Structural Adjustment Action Vector and Work Requirement Action Vector, an identifier, for example, 'ME' which means a medium of the main memory is univocally assigned.

Also, as to Action Operator j, actions of the following kinds are required in principle.

- Command Action Vector which manages Open of memory medium of File.
- Command Action Vector which manages Reference of memory medium of File.
- Structural Adjustment Action Vector
- Routing Action Vector
- Command Action Vector which manages Close of memory medium of File

Accordingly, in case of Program Identifier of the 'T1's W02 Action Vector,' for example, in case of the Command Action Vector which manages OPEN of memory medium of File and when it has an action name 'Open' and an Action Operator 'OPEN' against File with a Definitive name 'Conversion Value Standard Ledger' and the Definitive Identifier 'UGECD100', it becomes as follows:
@%M@ = UGECD100, @%j@ = OPEN
and the Program Identifier is univocally determined as

```
P2-UGECD100-OPEN-SEC SECTION.
P2-UGECD100-OPEN-SEC-START.
```

Also, for example, in the Command Action Vector which manages REFERENCE of memory medium of File, assuming it has an action name 'Reference' and an Action Operator 'READ' against File with a Definitive name 'Conversion Value Standard Ledger' and the Definitive Identifier 'UGECD100', it becomes as follows:
@%M@ = UGECD100, @%j@ = READ
and the Program Identifier is univocally determined as

```
P2-UGECD100-READ-SEC SECTION.
P2-UGECD100-READ-SEC-START.
```

Also, for example, in the Structural Adjustment Action Vector, in case of an action name 'Initial Process' and an Action Operator 'INIT', the '@%M@' is univocally determined as 'Main Memory. Thus the Definitive Identifier becomes univocally 'ME'. So, it is
@%M@ =ME, @%j@ = RT1
and the Program Identifier is univocally determined as

```
P2-ME-RT1-SEC SECTION.
P2-ME-RT1-SEC-START.
```

Also, for example, in the Directive Action Vector which manages CLOSE of memory medium File, assuming it has an action name 'Close' and an Action Operator 'CLOSE' against File with a Definitive name 'Conversion Value Standard Ledger' and the Definitive Identifier 'UGECD100', it becomes as follows:
@%M@ = UGECD100, @%j@ = CLOSE
and the Program Identifier is univocally determined as

```
P2-UGECD100-CLOSE-SEC SECTION.
P2-UGECD100-CLOSE-SEC-START.
```

Next, the "Execute' (step 10101) is a logic to check whether to operate or not the "Execute Process" (step 10103). In Tense Control Vector, it is implemented by the logic of 'Empty', but in Action Vector, it is determined by the principle's various points for every Action Vector.

For example, in the Structural Adjustment Action Vector which manages 'Initial Process', it becomes as follows which is expressed as Program Template in COBOL:

```
IF @%M2-@%j@-FLG OF CTL-BOX NOT = '1'
```

Accordingly, when the action name of T1's W02 Action Vector is 'Initial Process' and the Action Operator is 'INIT', it is

@%M@ =ME, @%j@ = INIT

So, the codes for 'Execute' (step 10101) is univocally determined as follows:

```
IF ME-INIT-FLG OF CTL-BOX NOT = '1'
```

The meaning of these codes is that it is a logic which checks the absence of the Flag identified by the 'ME-INIT-FLG' identifier which is prepared in the group item that is identified by the 'CTL-BOX' identifier, that is, the absence of the Execute Done Flag of the Structural Adjustment Action Vector which manages Initial Process.

Also, for example, in the Command Action Vector which manages 'File Open', it becomes as follows which is expressed as Program Template in COBOL:

```
IF @%M@-@%j@-FLG OF CTL-BOX NOT = '1'
AND @%M@-STOP-FLG OF CTL-BOX = NOT '1'
```

Accordingly, when the action name is 'Open' and the Action Operator is 'OPEN' against File with the T1's W02 Action Vector's Definitive name 'Conversion Value Standard Ledger' and the Definitive Identifier 'UGECD100', it is

@%M@ = UGECD100,
@%j@ = OPEN

So, the codes for the 'Execute' (step 10101) is univocally determined as follows:

```
IF UGECD100-OPEN-FLG OF FILE CTL-BOX NOT = '1'
AND UGECD100-STOP-FLG OF CTL-BOX = NOT '1'
```

The meaning of these codes is that it is a logic which checks on the following: the absence of the Flag identified by the 'UGECD100-OPEN-FLG' identifier which is prepared in the group item that is identified by the 'CTL-BOX' identifier, that is, the absence of the Execute Done Flag of the Structural Adjustment Action Vector which manages Open of File of 'Conversion Value Standard Ledger', as well as the absence of the Flag identified by the 'UGECD100-STOP-FLG' identifier which is prepared in the group item that is identified by the 'CTL-BOX' identifier, that is, the absence of the STOP Flag of the process against the 'Conversion Value Standard Ledger' File.

Also, for example, in the Action Vector which manages 'File Reference', it becomes as follows which is expressed as Program Template in COBOL:

```
IF WFL-@%M@ OF WFL-BUF = LOW-VALUE
AND @%M@-@%j@-FLG OF CTL-BOX NOT = '1'
AND @%M@-EOF-FLG OF CTL-BOX NOT = '1'
AND @%M@-STOP-FLG OF CTL-BOX NOT = '1'
AND @%M@-OPEN-FLG OF CTL-BOX = '1'
```

Accordingly, when the action name is 'Reference' and the Action Operator is 'READ' against File with Definitive name 'Conversion Value Standard Ledger' and Definitive Identifier 'UGECD100', it is

@%M@ = UGECD100,
@%j@ = READ

So, the codes for the 'Execute' (step 10101) is univocally determined as follows:

```
IF WFL-UGECD100 OF WFL-BUF = LOW-VALUE
AND UGECD100-READ-FLG OF CTL-BOX NOT = '1'
AND UGECD100-EOF-FLG OF CTL-BOX NOT = '1'
AND UGECD100-STOP-FLG OF CTL-BOX NOT = '1'
AND UGECD100-OPEN-FLG OF CTL-BOX = '1'
```

The meaning of these codes is to implement checks on the following: no presence (LOW-VALUE) of a data code in the read-in area of File with the Definitive name 'Conversion Value Standard Ledger' and the Definitive Identifier 'UGECD100', which are identified by the identifier 'WFL-UGECD100' that are prepared in the group item identified by the identifier 'WFL-BUF'; no setting of the flag identified by the identifier 'UGECD100-READ-FLG' which is prepared in the group item identified by the identifier 'CTL-BOX,' that is, the 'Execute Done' flag of the Reference process against the 'Conversion Value Standard Ledger' File; no setting of the flag identified by the identifier 'UGECD100-EOF-FLG' which is prepared in the group item identified by the identifier 'CTL-BOX,' that is, the flag meaning the completion of all the processes to the 'Conversion Value Standard Ledger' File; no setting of the flag identified by the identifier 'UGECD100-STP-FLG' which is prepared in the group item that is identified by the identifier 'CTL-BOX,' that is, the 'flag' meaning stop of the process against the 'Conversion Value Standard Ledger' File; and the setting of the flag identified by the identifier 'UGECD100-OPN-FLG' which is prepared in the group item identified by the identifier 'CTL-BOX,' that is, the flag meaning Open against the 'Conversion Value Standard Ledger' File.

Also, for example, in case of the Command Action Vector which manages 'File Close', it becomes as follows if expressed as Program Template in COBOL:

```
IF @%M@-@%j@-FLG OF CTL-BOX NOT = '1'
AND (@%M@-EOF-FLG OF CTL-BOX NOT = '1'
  OR @%M@-STOP-FLG OF CTL-BOX NOT = '1')
AND @%M@-OPEN-FLG OF CTL-BOX = '1'
```

Accordingly, when the action name is 'Close' and the Action Operator is 'CLOSE' against File with Definitive name 'Conversion Value Standard Ledger' and Definitive Identifier 'UGECD100', it is

@%M@ = UGECD100,
@%j@ = CLOSE

So, the codes for 'Execute' (step 10101) is univocally determined as follows:

```
IF UGECD100-CLOSE-FLG OF CTL-BOX NOT = '1'
AND (UGECD100-EOF-FLG OF CTL-BOX NOT ='1'
  OR UGECD100-STOP-FLG OF CTL-BOX NOT = '1'
AND UGECD100-OPEN-FLG OF CTL-BOX = '1'
```

The meaning of these codes is to implement check on the following: the acceptance of among no setting of the flag identified by the identifier 'UGECD100-CLOSE-FLG' which is prepared in the group item identified by the identifier 'CTL-BOX,' that is, the 'Execute Done' flag of the Close of process against the 'Conversion Value Standard Ledger' File, no setting of the flag identified by the identifier 'UGECD100-EOF-FLG' which is prepared in the group item that is identified by the 'CTL-BOX' identifier, that is, the flag meaning End of all process against the 'Conversion Value Standard Ledger' File, or no setting of the flag identified by the identifier 'UGECD100-STOP-FLG' which is prepared in the group item identified by the identifier 'CTL-BOX,' that is, the flag meaning Stop of the process against the 'Conversion Value Standard Ledger' File; as well as the setting the flag identified by the identifier 'UGECD100-OPEN-FLG' which is prepared in the group item identified by the identifier 'CTL-BOX,' that is, the flag meaning 'Open' against the 'Conversion Value Standard Ledger' File.

Also, for example, in case of the Routing Action Vector that designates anything but Continuous Unit-Link, it becomes as follows if expressed as a Program Template in COBOL.

```
IF @%F@-STOP OF CTL-BOX NOT = '1'
```

In this Program Template, the @%F@ is Definitive Identifier which identifies memory medium File in the W02 Pallet.

Accordingly, in case of the File with the Definitive name "Conversion Value Standard Ledger' and the Definitive Identifier 'UCGCD100' in T1's W02 Pallet, it is

```
@%F@ = UGECD100
```

and the 'Execute' (step 10101) codes are univocally determined as follows:

```
IF UGECD100-STOP OF CTL-BOX NOT = '1'
```

The meaning of these codes are to implement checks on no setting of the flag identified by the identifier 'UGECD100-STOP-FLG' which is prepared in the group item identified by the identifier 'CTL-BOX,' that is, the flag meaning Stop of the process against the 'Conversion Value Standard Ledger' File.

Next, the 'Execute' (step 10103)is a logic of the process content of 'Execute Process'. In Tense Control Vector, it is implemented as a logic of 'Self Creation but in Action Vector, it realizes purposes for every Action Vector (that is, 'Route Setting Action', 'Structural Adjustment Action', 'Directive Action' and 'Work Requirement Action').

For example, in case of the Structural Adjustment Action Vector which manages 'Initial Process', it becomes as follows if expressed in COBOL as Program Templates:

```
IF @%F@-READ-CTR-CUR OF CTL-BOX = LOW-VALUE
    INITIALIZE @%F@-READ-CTR-CUR OF CTL-BOX
END-IF.
IF @%F@-READ-CTR-OLD OF CTL-BOX = LOW-VALUE
    INITIALIZE @%F@-READ-CTR-OLD OF CTL-BOX
END-IF.
IF @%f@-READ-CTR-NEW OF CTL-BOX = LOW-VALUE
    INITIALIZE @%F@-READ-CTR-NEW OF CTL-BOX
END-IF.
```

The '@%F@' in this Program template is Definitive Identifier which identifies memory medium File in the related W02 Pallet.

Accordingly, in case of the File with its Definitive name "Conversion Value Standard Ledger' and its Definitive Identifier 'UCGCD100' in T1's W02 Pallet, it is

```
@%F@ = UGECD100
```

So, the 'Execute' (step 10101) codes are univocally determined as follows:

```
IF UGECD100-READ-CTR-CUR OF CTL-BOX = LOW-VALUE
    INITIALIZE UGECD100-READ-CTR-CUR OF CTL-BOX
END-IF.
IF UGECD100-READ-CTR-OLD OF CTL-BOX = LOW-VALUE
    INITIALIZE UGECD100-READ- CTR-OLD OF CTL-BOX
END-IF.
IF UGECD100-READ-CTR-NEW OF CTL-BOX = LOW-VALUE
    INITIALIZE UGECD100-READ-CTR-NEW OF CTL-BOX
END-IF.
```

The meaning of these codes is as follows: When data code is not present (LOW-VALUE) in the data field which manages the (current) number of READ of Records identified by the identifier 'UGECD100-READ-CTR-CUR' which is prepared in the group item identified by the identifier 'CTL-BOX,' an initial value complying to the data field's attribute is set, and in addition, when data code is not present (LOW-VALUE) in the data field which manages the (current) number of READ of Records identified by the identifier 'UGECD100-READ-CTR-OLD' which is prepared in the group item identified by the identifier 'CTL-BOX,' an initial value complying to the data field's attribute is set, and in addition, when data code is not present (LOW-VALUE) in the data field which manages the (current) number of READ of Records identified by the identifier 'UGECD100-READ-CTR-NEW' which is prepared in the group item identified by the identifier 'CTL-BOX,' an initial value complying to the data field's attribute is set.

Also, for example, in the Action Vector which manages 'File Open', it becomes as follows which is expressed as Program Template in COBOL.

```
OPEN INPUT @%f@
MOVE @%F@-STS TO @%F@-OPEN-STS OF CTL-BOX
```

In this Program Template, the @%F@ is Definitive Identifier which identifies memory medium File in the W02 Pallet.

Accordingly, in case of the File with its Definitive name 'Conversion value Standard Ledger' and with its Definitive Identifier 'UGECD100', it is

@%F@ = UGECD100

So, the codes for the "Execute' (step 10103) is univocally determined as follows:

```
OPEN INPUT UGECD100
MOVE UGECD100-STS TO @ UGECD100-OPEN-STS OF CTL-BOX
```

The meaning of these codes is to open File identified by the identifier 'UGECD100' in Reference mode (INPUT), and the content of the data field identified by the identifier 'UGECD100-STS' that records execute results of the Open Directive is set into the data field identified by the identifier 'UGECD100-OPEN-STS' that is prepared in the group item identified by the identifier 'CTL-BOX.'

Also, for example, in the Action Vector which manages 'File Reference', it becomes as follows, which is expressed as Program Template in COBOL:

```
COMPUTE @%F@-READ-CNT-NEW OF CTL-BOX
    = @%F@-READ-CNT-NEW OF CTL-BOX + 1
READ @%F@
  AT END
    CONTINUE
END-READ
MOVE @%F@-STS TO @%F@-READ-TST OF CTL-BOX
IF @%f@-READ-STS OF CTL-BOX = ZERO
  MOVE @%F@-REC TO WFL-@%F@
  COMPUTE @%F@-READ-CNT-CUR OF CTL-BOX
      = @%F@-READ-CNT-CUR OF CTL-BOX + 1
END-IF
IF @%F@-READ-STS OF CTL-BOX = 'EOF
  MOVE '1' TO @%F@-EOF-FLG OF CTL-BOX
END-IF
```

In this Program Template, the '@%F@' is Definitive Identifier which identified memory medium File in the related W02 Pallet.

Accordingly, in case of the File with its Definitive name 'Conversion value Standard Ledger' and its Definitive Identifier 'UGECD100', it is

@%F@ = UGECD100

So, the codes for the "Execute' (step 10103) is univocally determined as follows:

```
COMPUTE UGECD100-READ-CNT-NEW OF CTL-BOX
      = UGECD100-READ-CNT-NEW OF CTL—BOX + 1
READ UGECD100
  AT END
      CONTINUE
  END-READ
  MOVE UGECD100-STS TO UGECD100-READ-STS OF
CTL-BOX
  IF UGECD100-READ-STS OF CTL-BOX = ZERO
      MOVE UGECD100-REC TO WFL- UGECD100
      COMPUTE UGECD100-READ-CNT-CUR OF CTL-BOX
          = UGECD100-READ-CNT-CUR OF CTL-BOX + 1
  END-IF
  IF UGECD100-READ-STS OF CTL-BOX = 'EOF'
      MOVE '1' TO UGECD100-EOF-FLG OF CTL-BOX
  END-IF
```

The meaning of these codes is as follows: After the content of the data field which manages the number (new) of READ of records identified by the identifier 'UGECD100-READ-CTR-NEW' which is prepared in the group item identified by the identifier 'CTL-BOX' is added '1', File with its Definitive name 'Conversion Value Standard Ledger' and its Definitive Identifier 'UGECD100,' is read in (READ), and the content of the data field identified by the identifier 'UGECD100-STS' which records an execute result of the READ-in Direction is set into the data field identified by the identifier 'UGECD100-READ-STS' which is prepared in the group item identified by the identifier 'CTL-BOX.' Then, if the execute result of the READ-in Direction is nor mal (ZERO), it is identified by the identifier 'UGECD100-REC,' and all the content of the data field in which the read-in data code has been set shall be set into the read-in area of File with its Definitive name 'Conversion Value Standard Ledger' and its Definitive Identifier 'UGECD100', which is identified by the identifier 'WFL-UGECD100' that is prepared in the group item identified by the 'WFL-BUF'. On the other hand, it adds only '1' to the content in the data field which manages the (current) number of READ of Records identified by the identifier 'UGECD100-READ-CTR-CUR' which is prepared in the group item identified by the identifier 'CTL-BOX, ' and on the other hand if the execute result of the Read-in Direction is File End (EOF), it sets File End Flag identified by the 'UGECD100-EOF-FLG' which is prepared in the group item identified by the identifier 'CTL-BOX.' Also, for example, in the Command Action Vector which manages 'File Chain', it becomes as follows, which is expressed as Program Template in COBOL.

```
CLOSE @%F@
MOVE @%F@-STS TO @%F@-CLS-STS OF CTL-BOX
```

The @%F@ in this Program Template is Definitive Identifier which identifies memory medium File in the W02 Pallet.

Accordingly, in case of the File with its Definitive name 'Conversion Value Standard Ledger' and its Definitive Identifier 'UGECD100' it is

@%F@ = UGECD100

So, the codes for the 'Execute Process' (step 10103) is univocally determined as follows:

```
CLOSE UGECD100
MOVE UGECD100-STS TO UGECD100-CLS-STS OF CTL-BOX
```

The meaning of these codes is as follows: The content of the data field identified by the identifier 'UGECD100-STS,' in which the execute result of the Close Direction is recorded against File with its Definitive name 'Conversion Value Standard Ledger' and its Definitive Identifier 'UGECD100,' is set into the data field identified by the identifier 'UGECD100-CLS-STS' which is prepared in the group item identified by the identifier 'CTL-BOX.'

Also, for example, with the 'Routing Action Vector' that designates Continuous Chain, it becomes as follows, which is expressed as Program Template in COBOL:

```
MOVE '@%F@W04' TO T1-PALLETID OF CTL-INF
```

The @%F@ in this Program Template is Definitive Identifier which identifies memory medium File concerned with W04 to be activated next to the W02 Pallet.

For example, in case of the File with its Definitive name 'UGECF110' and its Definitive Identifier 'Classification Ledger' out of 'T1's W02 Pallet' of the File with its Definitive name 'Conversion Value Standard Ledger' and its Definitive Identifier 'UGECD100,' it is

@%F@ = UGECF110 and the codes for the 'Execute' (step 10103) is univocally determined as follows:

```
MOVE ' UGECF110W04' TO T1-PALLETID OF CTL-INF
```

The @%F@ in this Program Template is Definitive Identifier which identifies memory medium File concerned with W03 to be activated next to the W02 Pallet.

For example, in case the name of the final object File of the related T1's Scenario Function is 'Conversion Value Standard Ledger' and the Definitive Identifier is 'UGECD100', it is

@%f@ = UGECD100

So, the codes for the 'Execute' (step 10103) is univocally determined as follows:

```
MOVE ' UGECD100W03' TO T1-PALLETID OF CTL-INF
```

The meaning of these codes is as follows: The W03 Pallet Identifier to be activated next to the W02 Pallet is set into the data field which records a Pallet Identifier identified by the 'T1-PALLETID' which is prepared in the group item identified by the identifier 'CTL-INF.' The next 'Acceptance' (step 10105), 'Acceptance Process' (step 10107) and 'Refusal Flag Set' (step 10109) are a logic to implement both to check if the execute process was accepted or not and to proceed to the prescribed process in accordance with the checking result.

For example, in Structural Adjustment Action Vector which manages 'Initial Process', it is expressed in COBOL as Program Template as follows:

```
*    --< Acceptance>--
                    IF @%F@-READ-CTR-CUR OF CTL-BOX
                    = @%F@-READ-CTR-CUR OF CTL-BOX
*    --< Acceptance Process >--
                    MOVE '1' TO @%M@-@%j@-FLG OF CTL-BOX
```

```
*      < Refusal Process >--
              ELSE
                     CONTINUE
              END-IF
```

The '@%F@' in this Program Template is Definitive Identifier which identifies memory medium the File in its W02 Pallet and the '@%M@-@%j@' is an identifier of Action Operator.

Accordingly, in case of the File with its Definitive name 'Conversion Value Standard Ledger' and its Definitive Identifier 'UGECD100' in the T1's W02 Pallet, it is

@%F@ = UGECD100 and the Initial Process Action Operator is

@%M@-@%j@ = ME-INIT

So, the codes for the logic of 'Acceptance' (step 10105), 'Acceptance Process' (step 10107) and 'Refusal Flag Set' (step 10109) are univocally determined as follows:

```
*      --< Acceptance >--
                     IF UGECD100-READ-CTR-CUR OF CTL-BOX
                     = UGECD100-READ-CTR-CUR OF CTL-BOX
*      --< Acceptance Process >--
                     MOVE '1' TO ME-INIT-FLG OF CTL-BOX
*      < Refusal Process >--
              ELSE
                     CONTINUE
              END-IF
```

The meaning of these codes is as follows: The content of the data field identified by the 'UGECD100-READ-CTR-CUR'which is prepared in the group item identified by the 'CTL-BOX' and the content of the data field similarly identified by the 'UGECD100-READ-CTR-CUR'which is prepared in the group item identified by the 'CTL-BOX' are equal, that is, it unconditionally sets a flag meaning Initial Process Complete into the data field identified by the identifier 'ME-INIT-FLG' which is prepared in the group item identified by the 'CTL-BOX'.

Also, for example, in Action Vector which manages 'File Open', it is expressed in COBOL as Program Template as follows:

```
*      --< Acceptance Judgment >--
              IF @%F@-OPEN-STS OF CTL-BOX = ZERO
*      --< Acceptance Process >--
                     MOVE '1' TO @%F@-OPEN-FLG OF CTL-BOX
*      < Refusal Process >--
              ELSE
                     MOVE '1' TO @%F@-OPEN-ERR OF CTL-BOX
              END-IF
```

*The '@%F@' in this Program Template is Definitive Identifier which identifies memory medium File in the related W02 Pallet.*

Accordingly, in case of the File with its Definitive name 'Conversion Value Standard Ledger' and its Definitive Identifier 'UGECD100' in the T1's W02 Pallet, it is

@%F@= UGECD100

So, the codes of the logic 'Acceptance' (step 10105), 'Acceptance Process' (step 10107) and 'Refusal Flag Set' (step 10109) are univocally determined as follows:

```
*      --< Acceptance Judgment>--
                     IF UGECD100-OPEN-STS OF CTL-BOX =
              ZERO
*      --< Acceptance Process >--
                     MOVE '1' TO UGECD100-OPEN-FLG OF CTL-BOX
*      < Refusal Process >--
              ELSE
                     MOVE '1' TO UGECD100-OPEN-ERR OF CTL-BOX
              END-IF
```

The meaning of these codes is as follows: When the content of the data field identified by the identifier 'UGECD100-STS' in which the execution result of Open Direction of File identified by the identifier 'UGECD100' is normal ("ZERO"), it sets a flag identified by the identifier 'UGECD100-OPEN-FLG' which is prepared in the group item identified by the 'CTL-BOX', that is, the Execute Done Flag of the Command Action Vector which manages 'Open' of the 'Conversion Value Standard Ledger' file, and when the Open Direction's execution result is abnormal, it sets a flag identified by the identifier 'UGECD100-OPEN-ERR' identifier which is prepared in the group item identified by the 'CTL-BOX', that is, a flag which manages abnormality of the "Open' of the 'Conversion Value Standard Ledger' file.

Also, for example, in Action Vector which manages 'File Reference', it is expressed in COBOL as Program Template as follows:

```
*    --< Acceptance Judgment >--
               IF @%F@-READ-STS OF CTL-BOX = ZERO
               OR @%F@-READ-EOF OF CTL-BOX = '1'
*    --< Acceptance Process >--
                      MOVE '1' TO @%F@-READ-FLG OF CTL-BOX
*    < Refusal Process >--
               ELSE
                      MOVE '1' TO @%F@-READ-ERR OF CTL-BOX
               END-IF
```

*The '@%F@' in this Program Template is Definitive Identifier which identifies memory medium File in the W02 Pallet.*

Accordingly, in case of the File its the Definitive name 'Conversion Value Standard Ledger' and its Definitive Identifier 'UGECD100' in the T1's W02 Pallet, it is

@%F@ = UGECD100

So, the codes of the logic 'Acceptance' (step 10105), 'Acceptance Process' (step 10107) and 'Refusal Flag Set' (step 10109) are univocally determined as follows:

```
*    --< Acceptance Judgment>--
                      IF UGECD100-READ-STS OF CTL-BOX =
               ZERO
                      OR UGECD100-READ-EOF OF CTL-BOX
               = '1'
*    --< Acceptance Process >--
                      MOVE '1' TO UGECD100-READ-FLG OF CTL-BOX
*    < Refusal Process >--
               ELSE
                      MOVE '1' TO UGECD100-READ-ERR OF CTL-BOX
               END-IF
```

The meaning of these codes is as follows: When the content of the data field identified by the identifier 'UGECD100-STS' in which the execution result of File Reference Direction command of File identified by the identifier 'UGECD100' is normal ("ZERO"), or when a flag identified by the identifier 'UGECD100-EOF-FLG' identifier which is prepared in the group item identified by the 'CTL-BOX', that is, a flag which indicates All Process End of the process against the 'Conversion Value Standard Ledger' file has been set, it sets the flag identified by the identifier 'UGECD100-EOF-FLG' which is prepared in the group item identified by the 'CTL-BOX', that is, the Execute Done Flag of the Command Action Vector which manages 'Reference' of the 'Conversion Value Standard Ledger' file. When the execution result of Reference Direction is abnormal, it sets a flag identified by the identifier 'UGECD 100-READ-ERR' which is prepared in the group item identified by the 'CTL-BOX', that is, a flag which manages abnormality of 'Reference' of 'Conversion Value Standard Ledger' file. Also, for example, in Action Vector which manages 'File Close', it is expressed in COBOL as Program Template as follows:

```
*    --< Acceptance Judgment >--
               IF @%F@-CLS-STS OF CTL-BOX = ZERO
*    --< Acceptance Process >--
                      MOVE '1' TO @%F@-CLS-FLG OF CTL-BOX
*    < Refusal Process >--
               ELSE
```

```
                MOVE '1' TO @%F@-CLS-ERR OF CTL-BOX
          END-IF
```

*The '@%F@' in this Program Template is Definitive Identifier which identifies memory medium File in the related W02 Pallet.*

Accordingly, in case of the File with its Definitive name 'Conversion Value Standard Ledger' and its Definitive Identifier 'UGECD100' in the T1's W02 Pallet, it is

@%F@ = UGECD100

So, the codes of the logic 'Acceptance' (step 10105), 'Acceptance Process' (step 10107) and 'Refusal Flag Set' (step 10109) are univocally determined as follows:

```
*   --< Acceptance Judgment>--
                IF UGECD100-CLS-STS OF CTL-BOX =
          ZERO
                OR UGECD100-CLS-EOF OF CTL-BOX = '1'
*   --< Acceptance Process >--
                MOVE '1' TO UGECD 100-READ-FLG OF CTL-BOX
*   < Refusal Process >--
          ELSE
                MOVE '1' TO UGECD100-CLS-ERR OF CTL-BOX
          END-IF
```

The meaning of these codes is as follows: When the content of the data field identified by the identifier 'UGECD100-STS' in which the execution result of File Close Direction of File identified by the identifier 'UGECD100' is normal ("ZERO"), it sets the flag identified by the identifier 'UGECD100-CLS-FLG' which is prepared in the group item identified by the 'CTL-BOX', that is, the Execute Done Flag of the Command Action Vector which manages 'Close' of the 'Conversion Value Standard Ledger' file. On the other hand, when the execute result of Close Direction is abnormal, it sets a flag identified by the identifier 'UGECD100-CLS-ERR' which is prepared in the group item identified by the 'CTL-BOX', that is, a flag which manages abnormality of 'Close' of 'Conversion Value Standard Ledger' file.

*Also, for example, in Action Vector which manages 'File Close', it is expressed in COBOL as Program Template as follows:*

```
*   --< Acceptance Judgment >--
          IF T1-PALLETID-CLS-ST OF CTL-INF
          = T1-PALLETID OF CTL-INF
*   --< Acceptance Process >--
          MOVE '1' TO @%M@-@%j@-FLG OF CTL-BOX
*   --< Refusal Process >--
          ELSE
                CONTINUE
          END-IF
```

The Initial Process Action Operator in this Program Template is

@%M@-@%j@=ME-INIT

So, the codes of the logic 'Acceptance' (step 10105), 'Acceptance Process' (step 10107) and 'Refusal Flag Set' (step 10109) are univocally determined as follows:

```
*   --< Acceptance Judgment>--
                IF W03-ME-INIT-FLG OF CTL-BOX
                = W03-ME-INIT-FLG OF CTL-BOX
*   --< Acceptance Process >--
                MOVE '1' TO W03-ME-INIT-FLG OF CTL-BOX
*   --< Refusal Process >--
          ELSE
                CONTINUE
          END-IF
```

The meaning of these codes is that it sets unconditionally the Execute Done Flag of the 'Initial Process Action Vector'.

<<T1's W02 Homogeneity Vector>>

The various logical structural points of T1's W02 Homogeneity Vector based on the principle's theoretical base are as shown in Fig. 102.

The 'T1's W02 Homogeneity Vector' L2(r,i) is one component consisting of Scenario Function T1 which is expressed in the following expression, and it is a function which determines a software, regardless of business operation, its application field, its programming language, and its installment environments. Its Independent Variables are only 'Action Operator r, which identifies Reference File, and an identifier i of Words belonging to the File, only.

$$T1(f) = \Phi 1(\{\Phi p(rf, 2) \{\quad , L2(r, i), P2(r, j) , P2(j)\}\} r$$

$$+ \Phi p(rf, 3) \{Y3(r, i) , L3(r, i) , L3(f, i) , P3(j)\}$$

$$+ \Phi p(fr, 4) \{Y3(f, i) , L4(f,j), P4(f, j) , P4(j)\}\} f)$$

What is called Software herein generally means both the 'Logic possessed by Requirements' indicating, for example, what kind of data code should be attached to the data field identified by the Word Identifier; as well as how the data code should be embodied into the medium File identified by Definitive Identifier f, and the 'Logic possessed by the program composed of codes.' That is, Scenario Function T1 is a function which determines the Requirements and the program's codes simultaneously.

The flowchart shown in Fig. 102 shows a logical structure of the function L2(r,i) of the 'T1's W02 Homogeneity Vector'.

The L2(r,i) (10202) in the flowchart is as follows if expressed in COBOL as Program Template.

```
L2-@%r@-@%i@-SEC SECTION.
L2-@%r@-@%i@-SE-START.
```

The '@%r@' in this Program Template is the independent variable part of Definitive Identifier r and the '@%i@' is the independent variable part of Word Identifier i. Herein, the Definitive Identifier r is Definitive Identifier which identifies File that is referred as the creating source of data code to be created into the data field identified by Word Identifier belonging to Logical Record of the medium File that is identified by Definitive Identifier f.

Accordingly, for example, when the Definitive name is 'Conversion Value Standard Ledger' and the Definitive Identifier belongs to File 'UGECD100', and the Word name is 'Manufacturing Costs Total Standard Value' and the Word Identifier is 'MKELVL', the Program Identifier of the T1' W02 Homogeneity Vector becomes as follows:

@%r@=UGECD100, @%i@ = MKELVL

So, the Program Identifier is univocally determined as follows:

```
L2-UGECD100-MKELVL-SEC SECTION.
L2-UGECD100MKELVL-SEC-START.
```

Next, the 'Empty' (step 10201) is a test of the condition to execute logic to create Self's data code into the data field identified by Word Identifier which identifies the related Homogeneity Vector, and the Word Identifier is univocally determined as follows:

```
IF W02.@%r@-@%i@ = LOW-VALUE
```

For example, when the Definitive name is 'Conversion Value Standard Ledger' and the Definitive Identifier belongs to File of 'UGECD100', and the Word name is 'Manufacturing Costs Total Standard Value and the Word Identifier is 'MKELVL', it becomes as follows:

@%r@=UGECD10, @%i@ = MKELVL

So, the codes for 'Empty' (step 10201) are univocally determined as follows:

```
IF W02.UGECD100.MKELVL = LOW-VALUE
```

The meaning of these codes is as follows: the 'Empty' (step 10201) examination of the T1's W02 Homogeneity Vector concerned with the data field that belongs to File identified by the identifier 'UGECD100' and is identified by the identifier 'MKELVL' checks on no presence of data in the data field on W02 Pallet identified by an identifier which identifies the Self.

Next. the 'Self Creation' (step 10203) is a logic to create the Self data code into the data field identified by Word Identifier that identifies the Homogeneity Vector, an it become univocal as follows by the Word Identifier:

```
MOVE WFL-@%r@-@%i@ TO W02.@%r-@%i@
```

For example, when the Definitive name is 'Conversion Value Standard Ledger' and the Definitive Identifier belongs to File 'UGECD100,' and the Word name is 'Manufacturing Costs Total Standard Value' and the Word Identifier is 'MKELVL', it become as follows:

@%r@=UGECD100,

@%i@ = MKELVL

So, the 'Self Creation' (step 10203) codes are univocally determined as follows:

MOVE WFL-UGECD100.MKELVL TO W02.UGECD100.MKELVL

The meaning of these codes is as follows: the 'Self Creation' examination (step 10203) of the T1's W02 Homogeneity Vector concerned with the data field, which belong to File identified by the identifier 'UGECD100' and is identified by the identifier 'MKELVL,' is to set, into the data field on W02 Pallet identified by the Self-identifying identifier, the content of the data field 'WFL-UGECD100.MKELVL' which records are read in by the Reference Command Action Vector.

The next 'Acceptance' (step 10205), 'Acceptance Process' (step 10207) and 'Refusal Flag Set' (step 10209) are a logic accorded in the examination and the result thereof on whether the Self Creation was established or not, and it becomes univocal as follows by the Word Identifier:

```
IF W02.@%r@-@%i@ = LOW-VALUE
        MOVE "1" TO W02. @%r@-@%i@-NON
END-IF
```

For example, when the Definitive name is 'Conversion Vale Standard Ledger' and the Definitive Identifier belongs to File 'UGECD100', and the Word name is 'Manufacturing Costs Total Standard Value' and the Word Identifier is 'MKELVL', it becomes as follows:

@%r@=UGCD100,

@%i@ =MKELVL

So, the codes for the 'Acceptance' (step 10205), 'Acceptance Process' (step 10207) and 'Refusal Flag Set' (step 10209) are univocally determined as follows:

```
IF W02.UGECD100.MKELVL = LOW-VALUE
        MOVE "1" TO W02.UGEC100.MKELVL-NON
EN-IF
```

The meaning of these codes is as follows: The 'Acceptance' (step 10205), 'Acceptance Process' (step 10207) and 'Refusal Flag Set' (step 10209) of the T1's W02 Homogeneity Vector concerned with the data field, which belongs to File identified by the identifier 'UGECD100' and is identified by the identifier 'MKELVL' identifier, is to set Refusal Flag when the data code in the data field concerned with the Self on W02 Pallet identified by Self-identifying identifier is not present, that is, Self Creation was not materialize.

<< T1's W03 Homogeneity Vector>>

The various logical structural points of T1's W03 Homogeneity Vector based on the principle's theoretical base are as shown in Fig. 103.

The 'T1's W03 Homogeneity Vector' L3(r,i), 3(f,i) is one component consisting Scenario Function T1 which is expressed in the following expression, and it is a function which determines a software, regardless of its business, its application field, its programming language, and its installment environment. Its Independent Variables are 'Definitive Identifier' r, which identifies Reference File, and Definitive Identifier, which identifies a final objective File, and an identifier i of Words belonging to those Files, only.

$$T1(f) = \Phi 1(\{\Phi p(rf, 2) \{ \quad ,L2(r, i) , P2(r, j) , P(j)\}\} r$$

$$+ \Phi p(rf, 3 \{Y3(r, i) , L3(r, i) , L3(f, i) , P3(j)\}$$

$$+ \Phi p(fr, 4) \{Y3(f, i) , L4(f, j) , P4(f, j) , P4(j)\} f)$$

The flowchart shown in Fig. 103 is a logical structure of the functions of 'T1's W03 Homogeneity Vector', that is, L(r,i) and L3(f,i).

The L3(,i) (10302) and L3(f,i) in the flowchart become as follows, if expressed as Program Template in COBOL:

In case of the Word belonging to Reference File,

L3-@%r@-@%i@-RD-SEC SECTION.

L3-@%r@-@%i@-RD-SEC-START.

and, in case of the Word belonging to the Final Object File, it becomes as follows:

L3-@%f@-@%i@-UP-SEC SECTION.

L3-@%f@-@%i@-UP-SEC-START.

The '@%r@' and '@%f@' are independent variable parts with Definitive Identifier r or f, and the '@%i@ part is an independent variable of Word Identifier i. Herein, the Definitive Identifier r is Definitive Identifier which identifies File that is referred as the creating source of the data code to be created into the data field identified by Word Identifier belonging to Logical Record of the medium File that is identified by Definitive Identifier f.

Accordingly, for example, when the Definitive name is 'Conversion Value Standard Ledger' and the Definitive Identifier belongs to File of 'UGECD100', and the Word name is 'Manufacturing Costs Total Standard Value' and the Word Identifier is 'MKELVL', the Program Identifier of the T1's W02 Homogeneity Vector becomes as follows

@%r@=UGECF120
@%i@ = MKELVL

So its Program Identifier is univocally determined as follows:

L3-UGECF120-MKELVL-RD-SEC SECTION.
L3-UGECF120-MKELVL-RD-SEC-START.

Also, for example, when the Definitive name is 'Conversion Value Standard Ledger' and the Definitive Identifier belongs to File 'UGECD100', and the Word name is 'Manufacturing Costs Total Standard Value' and the Word Identifier is 'MKELVL', it becomes as follows:

@%f@=UGECD100
@%i@ = MKELVL

So, the Program Identifier is univocally determined as follows:

L3-UGECD100-MKELVL-UP-SEC SECTION.
L3-UGECD100-MKELVL-UP-SEC-START.

Next the 'Empty' (step 10301) is to check conditions to execute the logic which creates the Self data code into the data field identified by Word Identifier which identifies the Homogeneity Vector, and it becomes univocal as follows by Word Identifier:

IF W03.@%r@-@%i@-RD = LOW-VALUE

or,

IF W03.@%f@-@%i@-UP = LOW-VALUE

For example, when the Definitive name is 'Conversion Value Standard Ledger' and the Definitive Identifier belongs to File of 'UGCF120', and the Word name is 'Manufacturing Costs Total Standard Value' and the Word Identifier is 'MKELVL', it becomes as follows:

@%r@=UGECF120
@%i@ = MKELVL

So, the code column of the 'Empty' (step 10301) is univocally determined as follows:

IF W03.UGECF120.MKELVL-RK = LOWVALUE

Also, for example, when the Definitive name is 'Conversion Value Standard Ledger' and the Definitive Identifier belongs to the final object File 'UGECD100', and the Word name is 'Manufacturing Costs Total Standard Value' and the Word Identifier i 'MKELVL', it becomes as follows:

@%f@=UGECD100
@%i@ = MKELVL

So, it is univocally determined as follows:

IF W03.UGECD100.MKELVL-UP = LOW-VALUE

The meaning of these codes is as follows: The 'Empty' check (step 10301) of the T1's W03 Homogeneity Vector concerned with the data field identified by the identifier 'MKELVL' which belongs to File identified by the identifier 'UGECD100' implements a check on non-presence of the data code in the data field on W03 Pallet identified by the Self-identifying identifier.

Next, the 'Self Creation' (step 10303) is a logic for creating the Self data code into the data field identified by Word Identifier which identifies the Homogeneity Vector, and it becomes as follows by Word Identifier:

In case of Words belonging to Reference File,

MOVE W02.@%r@-@%i@ TO WK-@%r@-@%i@-RD

and, in case of Words belonging to Final Object File,

MOVE W03.@%f@-@%i@-RD TO WK-@%f@-@%i@-UP or,
COMPUTE WK-@%f@-@%i@-UP = W03.@%f@-@%i@-UP Operator W03.@%r@-@%i@-RD

For example, when the Definitive name is 'Conversion Value Standard Ledger' and the Definitive Identifier belongs to File 'UGECF120', and the Word name is 'Manufacturing Costs Total Standard Value' and the Word Identifier is 'MKELVL', it becomes as follows:

@%r@=UGECF120
@%i@ = MKELVL

So, the codes of the 'Self Creation' (step 10303) are univocally determined as follows:

MOVE W02.UGECF120.MKELVL TO WK-UGECF120.MKELVL-RD

Also, for example, when the Definitive name is 'Conversion Value Standard Ledger and the Definitive Identifier belongs to the Final Object File of 'UGECD100', and the Word name is 'Manufacturing Costs Total Standard Value' and the Word Identifier is 'MKELVL', it becomes as follows:

@%r@=UGECD100
@%i@ = MKELVL

So, the codes of the 'Self Creation' (step 10303) is univocally determined as follows:

MOVE W03.UGECF120.MKELVL-RD TO WK-UGECD100.MKELVL-UP

The meaning of these codes is as follows: The 'Self Creation' (step 10303) of the T1's W03 Homogeneity Vector concerned with the data field which belongs to Reference File identified by the identifier 'UGECF120' and is identified by the identifier 'MKELVL' shall duplicate the content of the data field on W02 Pallet identified by Self-identifying identifier (that is, data code written in by Reference Command Action Vector that is mounted on T1's W02 Pallet ) into the work data field on W03 Pallet identified by the Self-identifying identifier. Also, the 'Self Creation' (step 10303) of the T1's W03 Homogeneity Vector concerned with the data field which belongs to Final Object File identified by the identifier 'UGECD100' and is identified by the identifier 'MKELVL' shall duplicate the content of the data field on W03 Pallet, which belongs to Reference File identified by the identifier 'UGECF120' and is identified by the identifier 'MKELVL' (that is, the data code created by the Homogeneity Vector which is identified by 'L3-UGECF120-MKELVL-RD-SEC') into the work data field on W03 Pallet. The next 'Acceptance' (step 10305) and 'Acceptance Process' (step 10307) are a logic to implement checks if the Self Creation has been established or not and to implement Acceptance Process when the Self Creation was established. It becomes as follows by Word Identifier:

In case of Words belonging to Reference File,

* --<Acceptance Judgment>>--
IF WK-@%r@.@%i@-RD NOT = LOW-VALUE
* --<Acceptance Process>--
MOVE WK-@%r@-@%i@-RD
TO W03-@%r@-@%i@-RD and, in case of Words belonging to Final Object File,
* --<Acceptance Judgment>>--
IF WK-@%f@-@%i@-UP NOT = LOW-VALUE
AND @%f@-UP-MIXFLG OF CTL-BOX = '1'
* --<Acceptance Process>--
MOVE WK-@%f@-@%i@-UP
TO W03-@%f@-@%i@-UP

For example, when the Definitive name is 'Conversion Value Standard Ledger' and the Definitive Identifier belongs to File 'UGECF120', and the Word name is 'Manufacturing Costs Total Standard Value' and the Word Identifier is 'MKELVL', it becomes as follows:

@%r@=UGECF120
@%i@ = MKELVL

So, the codes of the 'Acceptance' (step 10305) and 'Acceptance Process' (step 10307) is univocally determined as follows:

* --<Acceptance Judgment>>--
IF WK-UGECF120.MKELVL-RD NOT = LOW-VALUE
* --<Acceptance Process>--
MOVE WK-UGEC120.MKELVL-RD
TO W03-UGECF120.MKELVL-RD

The meaning of these codes is as follows: The 'Acceptance'(step 10305) of the T1's W03 Homogeneity Vector concerned with the data field which belongs to Reference File identified by the identifier 'UGECF120' and is identified by the identifier 'MKELVL' shall check on the presence of the data code in the work data field on W03 Pallet identified by Self-identifying identifier and, when it is present, it shall be duplicated into the data field on W03 Pallet identified by Self-identifying identifier as 'Acceptance Process' (step 10307).

Also, for example, when the Definitive name is 'Conversion Value Standard Ledger' and the Definitive Identifier belongs to the Final Object File of 'UGECD100', and the Word name is 'Manufacturing Costs Total Standard Value' and the Word Identifier is 'MKELVL', it becomes as follows:

@%r@=UGECD100
@%i@ = MKELVL

So, the codes of the 'Self Creation' (step 10303) is univocally determined as follows:

```
*    -<Acceptance Judgment>>--
           IF WK-UGECD100.MKELVL-UP NOT = LOWVALUE
           ANK UGECD100-UP-MIX-FLG OF CTL-BOX = '1'
*    --<Acceptance Process>--
                  MOVE WK-UGECD100.MKELVL-UP
                      TO W03.UGECD100.MKELVL-UP
```

The meaning of these codes is as follows: The 'Acceptance'(step 10305) of the T1's W03 Homogeneity Vector concerned with the data field which belongs to Final Object File identified by the identifier 'UGECD100' identifier and is identified by the identifier 'MKELVL' shall check on the presence of the data code in the work data field on W03 Pallet identified by Self-identifying identifier as well as it shall check if the 'Mix Flag' has been set or not which manages the process by mixing output record of the Final Object File identified by the identifier 'UGECD100,' and when the checks were accepted, it shall duplicate the data code in the work data field on W03 Pallet identified by the Self-identifying identifier into the data field on W03 Pallet identified by Self-identifying identifier as 'Acceptance Process'(step 10307).
Hereupon, the management of the Mix Flag is implemented by the W03's 'Structural Adjustment Action Vector' which operates between the action of the W03 Homogeneity Vector group concerned with Reference File and the action of the W03 Homogeneity Vector group concerned with Final Object File. Details are explained later.
The next 'Restart Counter+1' (step 10309), 'Restart' (step 10311), Restart Flag Set (step 10313) and 'Refusal Flag Set' (step 10315) are a logic required for the case of Refusal of the creation of the Self data code identified by Word Identifier which identifies the related Homogeneity Vector, and it becomes as follows by Word Identifier:
In case of Words belonging to Reference File,
None and in case of Words belonging to Final Object File,

```
*    --<Restart Process>--
           ELSE
                  COMPUTE @%f@-@i@ OF UP-CTR
                      = @%f@-@%i@ OF UP-CTR + 1
                  IF @%f@-@%i@ OF UP-CTR <
           RECALL-MAX
                      MOVE '1' TO RECALL-FLG
*    --<Refusal Process>--
           ELSE
                      MOVE '1' TO W03. @%f@-@%i@-UP-NON
           END-IF
         END-IF
```

For example, when the Definitive name is 'Conversion Value Standard Ledger' and the Definitive Identifier belongs to the Final Object File 'UGECD100', and the Word name is 'Manufacturing Costs Total Standard Value' and the Word Identifier is 'MKELVL', it becomes as follows:
@%r@=UGECD100
@%i@ = MKELVL
So, the codes for the 'Restart Counter+1' (step 10309), 'Restart' step 10311), Restart Flag Set' (step 10313) and 'Refusal Flag Set' (step 10315) become as follows

```
*    --<Restart Process>--
           ELSE
                  COMPUTE UGECD100-MKELVL OF UP-CTR
                      = UGECD100-MKELVL OF UP-CTR + 1
                  IF UGECD100-MKELVL OF UP-CTR<
           RECALL-MAX
                  MOVE '1' TO RECALL-FLG
*    --<Refusal Process>--
           ELSE
                  MOVE '1' TO W03.UGECD100-MKELVL-UP-NON
           END-IF
         END-IF
```

<<T1's W03 Action Vector >>

The various points of the logical structure based on the principle's theoretical base possessed by T1's W03 Action Vector is as shown in Fig. 104.

The 'T1's W03 Action Vector' P3(j) is one element consisting of Scenario Function expressed by the following expression, and, it is a function which determines software, regardless of its business operation, its application field, its programming language, and its installment environment. Its Independent Variable is only an 'Action Operator' j only.

$$T1(f') = \Phi 1(\{\Phi p(rf, 2) \{ \quad , L2(r, i) , P2(r, j) , P2(j)\}\}r$$

$$+ \Phi p(rf, 3) \{Y3(r, i) , L3(r, i) , L3(f, i) , P3(j)\}$$

$$+ \Phi p(fr, 4) \{Y3(f, i), L4(f,j), P4(f, j) , P4(j)\}\} f)$$

The flowchart shown in Fig. 104 indicates a Logical Structure of the function P3(j) of the T1's W03 Action Vector.

The P3(j) (10402) in the flowchart becomes as follows, if expressed in COBOL as Program Template:

P3-@%M@-@%j@-SEC SECTION.
P3-@%M@-@%j@-SEC-START.

The '@%M@' in the Program Template is the Independent Variable part of Definitive Identifier M, and also the '@%j@' is the Independent Variable part of the Action Operator j. Hereupon, Definitive Identifier M is univocally determined as Definitive Identifier concerned with the Logical Record which identifies the medium subjected as an object for operation, in case of the Command Action Vector. On the other hand, in case of Routing Action vector, Structural Adjustment Action Vector and Work Requirement Action vector, it is univocally allocated by, for example, the 'ME' identifier which means a medium Main Memory.

Also, as to Action Vector j, actions of the following kinds are necessary in case of the T1's W03 Action Vector: XXVIII. Structural Adjustment Action Vector

XXIX. Initial Process
XXX. Key Duplicate
XXXI. Mix Flag Setting
XXXII. Intermediary Area Duplicate
XXXIII. Key Setting
XXXIV. Stop Report Setting
XXXV. Parameter Take-in
XXXVI. Routing Action Vector
XXXVII. Restart Chain
XXXVIII. Duplication Chain
XXXIX. Duplex Chain

Accordingly, in case of Structural Adjustment Action Vector and when the Action name is 'Initial Process' and the Action Operator is 'INIT', the '@%M@' becomes univocal 'Main Memory, so Definitive Identifier becomes univocally 'ME'. That is,

@%M@=ME, @%j@=INIT

So, the Program Identifier is univocally determined as follows:

P3-ME-INIT-SEC SECTION.
P3-ME-INIT-SEC-START.

Next, similarly when the Action name of the Structural Adjustment Action Vector is 'Initial Process', the 'Execute' (step 10401) becomes as follows, if expressed in COBOL as Program Template:

IF W03-@%M@-@%j@-FLG OF CTL-BOX NOT = '1'

Accordingly, the Definitive Identifier, whose Action name of T1's W03 Action Vector is 'Initial Process,' is 'ME' and the Action Operator is 'INIT'. Thus, it becomes as follows:

@%M@=ME
@%j@=INIT

So, the codes for the 'Execute' (step 10401) is univocally determined as follows:

IF W03-ME-INIT-FLG OF CTL-BOX NOT = '1'

The meaning of these codes is that it checks on no presence of the Flag identified by the identifier 'W03-ME-INIT-FLG' which is prepared in the group item that is identified by the identifier 'CTL-BOX,' that is, the absence of the Execute Done Flag of the Structural Adjustment Action Vector which manages Initial Process.

Next, similarly when the Action name of the Structural Adjustment Action Vector is 'Initial Process', the 'Execute Process' (step 10403) becomes as follows, if expressed in COBOL as Program Template:

```
*    --- Restart Flag / Refusal Flag / Restart CTR Initialize ---
             MOVE LOW-VALUE TO RECALL-FLG.
             INITIALIZE RECALL-CTR OF W03-@%f@.
             INITIALIZE NON-FLG OF W03-@%f@.
*    --- Homogeneity Vector Work Area Initialize ---
             MOVE LOW-VALU TO WK-@%r@.
             MOVE LOW-VALUE TO WK-@%f@.
```

The '@%f@' in this Program template is an identifier of Final Object File of the T1's Scenario Function and the '@%r@' is an identifier of Reference File. Therefore, when the Final Object File name is 'Conversion Value Standard Ledger' and the Definitive Identifier is 'UGECD100', and the Reference File name is 'Manufacturing Costs Total Standard Ledger' and the Definitive Identifier is 'UGECF120', the codes for the 'Execute Process' (step 10403) are univocally determined as follows:

```
*    --- Restart Flag / Refusal Flag / Restart CTR Initialize ---
             MOVE LOW-VALUE TO RECALL-FLG.
             INITIALIZE RECALL-CTR OF UGECD100.
             INITIALIZE NON-FLG OF UGECD100.
*    --- Homogeneity Vector Work Area Initialize ---
             MOVE LOW-VALU TO WK-UGECF120.
             MOVE LOW-VALUE TO UGECD100.
```

The meaning of these codes is that it is to initialize the entire data field of Restart Counter and Refusal Flag which are identified by the group item 'W03-UGECD100' of the Word belonging to Final Object File identified by the identifier 'UGECD100' requiring Restart Flag and Restart Process as well as to initialize the work data field identified by the group item 'WK-UGECD100'.

Next, similarly when the Action name of the Structural Adjustment Action Vector is 'Initial Process', the codes of the logic to check on the acceptance or refusal of the 'Acceptance' (step 10405), 'Acceptance Process' (step 10407), 'Execute Process' (step 10403) and 'Refusal Flag Set' (step 10409) and the logic accorded in its results are univocally determined as follows:

```
*    --<Acceptance Judgment>--
             IF W03-ME-INIT-FLG OF CTL-BOX
             = W03-ME-INIT-FLG OF CTL-BOX
*    --<Acceptance Process>--
             MOVE '1' TO W03-ME-INIT-FLG OF CTL-BOX
*    --<Refusal Process>--
             ELSE
                    CONTINUE
             END-IF
```

The meaning of these codes is to unconditionally set the Execute Done Flag of the Initial Process Action Vector.

Next, for example, in case of Structural Adjustment Action Vector, for example, when the Action name is 'Key Duplicate' and the Action Operator is 'KYTP', the '@%M@' becomes Definitive Identifier of the 'Reference File requiring Duplicate Unit-Link' (that is, Reference File requiring to create data code of the Word belonging to Final Object File, based on the Word belonging to plural Records on the same File). Therefore, when a File possessing such conditions has a File name 'Conversion Value Standard Ledger' as well as a Definitive Identifier 'UGECD100', it becomes as follows:

```
@%M@=UGECD100
```

Accordingly, Program Identifier with its Action name 'Key Duplicate' and its Action Operator 'KYTP,' is univocally determined as follows:

```
P3-UGECD100-KYTP-SEC SECTION.
P3-UGECD100-KYTP-SEC-START.
```

Next, similarly when Structural Adjustment Action Vector's Action name is 'Key Duplicate' and Action Operator is 'KYTP', the "Execute' (step 10401) becomes as follows, if expressed as Program Template in COBOL:

```
IF W03-@%f@-RD NOT = LOW-VALUE
OR @%f@-EOF-FLG CTL-BOX = '1'
```

The T1's W03 Action Vector's Action name is 'Key Duplicate' and Definitive Identifier is 'UGECD100', it becomes as follows:

@%f@=UGECD100

So, the codes for the 'Execute' (step 10401) is univocally determined as follows:

```
IF W03-UGECD100-RD NOT = LOW-VALUE
OR UGECD100-EOF-FLG OF CTL-BOX
```

The meaning of these codes is as follows: It checks on the presence of the data code in all data fields on W03 Pallet of the 'UGECD100' File with Definitive Identifier which is identified by the group item of the 'W03-UGECD100-RD' (that is, this field is the data field which was auto-produced by W03 Homogeneity Vector concerned with Reference File), or it checks on the setting of the Flag identified by the identifier 'UGECD100-EOF-FLG' which is prepared in the group item identified by the identifier 'CTL-Box,' that is, the Flag which manages End or Not of all process for the File of the Definitive Identifier 'UGECD100.'

Next, similarly when Structural Adjustment Action Vector's Action name is 'Key Duplicate' and its Action Operator is 'KYTP', the "Execute' (step 10403) becomes a s follows, if expressed as Program Template in COBOL;

```
*    --<Mix Key Set>---
*    --<If Not EOF>--
             IF W03-@%f@-RD NOT = LOW-VALUE
             AND @%f@-EOF-FLG OF CTL-BOX NOT = '1'
               MOVE @%f@-@%i@ OF W03-@%f@-RD
                   TO @%f@-@%i@-KEY-NEW OF CTL-BOX
             END-IF
*    --<If EOF>---
             IF @%f@-EOF-FLG OF CTL-BOX = '1'
               MOVE HIGH-VALUE
                   TO @%f@-@%i@-KEY-NEW OF CTL-BOX
             END-IF
*    --<If Old Key is not set yet>--
             IF @%f@-@%i@-KEY-OLD OF CTL-BOX = LOW-VALUE
               MOVE @%f@-@%i@-KEY-NEW OF CTL-BOX
                   TO @%f@-@%i@-KEY-OLD OF CTL-BOX
             IND-IF
```

The '@%f@' in this Program Template becomes an identifier of the Definitive Identifier of the 'Reference File requiring Duplicate Chain' (that is, Reference File requiring to create data code of the Word belonging to Final Object File based on the word belonging to plural records on the same File), and the '@%i@' is an access key to the File.

Accordingly, in case of the File with such conditions having the File name 'Conversion Value Standard Ledger' and the Definitive Identifier 'UGECD100', it becomes as follows:

@%f@=UGECD100 and, when the access key to the File is 'Factory Code' and the Word Identifier is 'FACTCD', it becomes as follows:

@%i@=FACTCD

Accordingly, these codes of the 'Execute Process' (step 10403) with its Action name 'Key Duplicate' and its Action Operator 'KYTP' is univocally determined as follows:

```
*    --<Mix Key Set>--
*    <If not EOF>--
             IF W03-UGECD100-RD NOT = LOW-VALUE
             AND UGECD100-EOF-FLG OF CTL-BOX NOT = '1'
               MOVE UGECD100-FACTCD OF W03-UGECD100-RD
                   TO UGECD100-FACTCD-KEY-NEW OF CTL-BOX
             END-IF
*    --<IF EOF>--
             IF UGECD100-EOF-FLG OF CTL-BOX = '1'
               MOVE HIGH-VALUE
```

```
                TO UGECD100-FACTCD-KEY-NEW OF CTL-BOX
          END-IF
*    --<If Old Key not set yet>--
          IF UGECD100-FACTCD-KEY-OLD OF CTL-BOX = LOW-VALUE
            MOVE UGECD100-FACTCD-KEY-NEW OF CTL-BOX
                TO UGECD100-FACTCD-KEY-OLD OF CTL-BOX
          END-IF
```

The meaning of these codes is as follows: When File Process is not End, it is

UGECD100-EOF-FLG OF CTL-BOX NOT = '1'

as well as when read-in data is present, it sets data code corresponding to an access key of the read-in data is overwritten into all the data field which evacuate a new key value identified by the identifier 'UGECD100-FACTCD-KEY-New' which is prepared in the group item identified by the identifier 'CTL-BOX,' and when File Process is All End, in case of UGECD100-EOF-FLG OF CTL-BOX, data code '1' (HIGH-VALUE) is set by overwriting into all data fields which evacuate a new key value identified by the identifier 'UGECD100-FACTCD-KEY-New' which is prepared in the group item which is identified by the identifier 'CTL-BOX,' and additionally when data code is not present (LOW-VALUE) in the data filed which evacuates a new key identified by the identifier 'UGECDIOO-FACTCD-KEY-New' which is prepared in the group item, it evacuates a new key value identified by the identifier 'UGECD100-FACTCD-KEY-New' which is prepared in the group item into the data field identified by the identifier 'UGECD100-FACTCD-KEY OLD.' Next, similarly, when Structural Adjustment Action Vector's Action name is 'Key Duplicate' and Action Operator is 'KYTP', the codes for the 'Acceptance' (step 10405), 'Acceptance Process' (step 10407) and 'Refusal Flag Set' (step 10409) become as follows:

```
*    --<Acceptance Judgment>--
          IF @%f@-@%i@-KEY-OLD OF CTL-BOX
          = @%f%-@%i@-KEY-OLD OF CTL=BOX
*    --<Acceptance Process>--
            CONTINUE
*    --<Refusal Process>--
          ELSE
                CONTINUE
          END-IF
```

In case where Structural Adjustment Action Vector's Action name is 'Key Duplicate' and Action Operator is 'KYTP, the '@%f@' is an identifier of the Definitive Identifier of the 'Reference File requiring Duplicate Chain' (that is, Reference File requiring to create data code of the Word belonging to Final Object File by based on the word belonging to plural records on the same File), and the '@%i@' is an access key to the File. Accordingly, in case of the File with such conditions having the File name 'Conversion Value Standard Ledger' and the Definitive Identifier 'UGECD100', it becomes as follows:

@%f@=VGECD100

and, when the access key to the File is 'Factory Code' and the Word Identifier is 'FACTCD', it becomes as follows:

@%i@=FACTCD

Accordingly, when Action name is 'Key Duplicate' and Action Operator is 'KYTP, the codes for the 'Acceptance' (step 10405), 'Acceptance Process' (step 10407) and 'Refusal Flag Set' (step 10409) are univocally determined as follows:

```
*    --<Acceptance Judgment>--
          IF UGECD100-FACTCD-KEY-OLD OF CTL-BOX
          = UGECD100-FACTCD-KEY-OLD OF CTL-BOX
*    --<Acceptance Process>--
            CONTINUE
*    --<Refusal Process>--
          ELSE
                CONTINUE
          END-IF
```

The meaning of these codes is a logic which ends the process unconditionally after the execute process.

Next, for example, in Structural Adjustment Action Vector, when the Action name is 'Mix Key Set' and the Action Operator is 'MIXF', the @%M@' becomes univocally Definite Identifier of the 'Reference File requiring Duplicate Chain' (that is, Reference File requiring to create data code of the Word belonging to Final Object File by based on the word belonging to plural records on the same File). Accordingly, in case of the File with such conditions having the File name 'Conversion Value Standard Ledger' and the Definitive Identifier 'UGECD100', it becomes as follows:

```
@%M@=UGECD100
```

So, Program identifier with its Action name 'Key Duplicate' and its Action Operator 'MIXF' is univocally determined as follows:

```
P3-UGECD100-MIXF-SEC SECTION.
P3-UGECD100-MIXF-SEC-START.
```

Next, similarly, when Structural Adjustment Action Vector's Action Name is 'Mix Flag Set' and its Action Operator is 'MIXF', the 'Execute' (step 10401) becomes as follows, if expressed as Program Template in COBOL:

```
IF W03-@%f@-RD-MIX-FLG OF CTL-BOX
= W03-@%f@-RD-MIX-FLG OF CTL-BOX
```

Accordingly, the Definitive Identifier, where the T1's W03 Action vector's Action name is 'Mix Flag Set,' is 'UGECD100', thus it becomes as follows:

```
@%f@=UGECD100
```

So, the codes for the ''Execute' (step 10041) is univocally determined as follows:

```
IF W03-UGECD100-RD-MIX-FLG OF CTL-BOX
= W03-UGECD100-RD-MIX-FLG OF CTL-BOX
```

Next, similarly, when Structural Adjustment Action Vector's Action Name is 'Mix Flag Set' and its Action Operator is 'MIXF', the 'Execute' (step 10403) becomes as follows, if expressed as Program Template in COBOL:

```
If @%f@-@%i@-KEY-OLD OF CTL-BOX NOT = LOW-VALUE
AND @%f%-@%i@-KEY-OLD OF CTL-BOX
NOT = @%f@-@%i@-KEY-NEW OF CTL-BOX
    MOVE '1' TO W03-@%f@-RD-MIX-FLG OF CTL-BOX
END-IF
```

The '@%f@' in this Program Template is an identifier of the Definitive Identifier 'Reference File requiring Duplicate Chain' (that is, Reference File requiring to create data code of the Word belonging to Final Object File based on the word belonging to plural records on the same File), and the '@%i@' is an access key to the File.

Accordingly, in case of the File with such conditions having the File name 'Conversion Value Standard Ledger' and the Definitive Identifier 'UGECD100', it becomes as follows:

```
@%f@=UGECD100
```

So, when an access key to the File is 'Factory Code' and the Word Identifier is 'FACTCD', it becomes as follows:

```
@%i@=FACTCD
```

So, the codes for the 'Execute Process' with its name 'Key Duplicate' and its Action Operator 'KYTP' is univocally determined as follows:

```
IF UGECD100-FACTCD-KEY-OLD OF CTL-BOX NOT-LOW-VALUE
AND UGECD100-FACTCD-KEY-OLD OF CTL-BOX
NOT = UGECD100-FACTCD-KEY-NEW OF CTL-BOX
    MOVE '1' TO W03-UGECD100-RD-MIX-FLG OF CTL-BOX
END-IF
```

The meaning of these codes is as follows: When a data is present in the data field to evacuate Old Key value identified by the 'UGECD100-FACTCD-KEY-OLD' which is prepared in the group item identified by the identifier 'CTL-BOX' and also when the content of the data field to evacuate Old Key value and of the data field to evacuate New Key value are not equal, it sets into the managed data field 'W03-UGECD100-RD-MIX-FLG OF CTL-BOX' such matter as that there is a mixture of Words belonging to plural records on the same File.

Next, similarly, when Structural Adjustment Action Vector's Action Name is 'Mix Flag Set' and Action Operator is 'MIXF', the codes of the logic of the 'Execute' (step 10405), 'Acceptance Process (step 10407) and 'Refusal Flag Set' (step 10407) become as follows:

```
*   --<Acceptance Judgment>--
        IF W03-@%f@-RD-MIX-FLG OF CTL-BOX
        = W03-@%f@-RD-MIX-FLG OF CTL-BOX
*   --<Acceptance Process>--
            CONTINUE
*   --<Refusal Process>--
        ELSE
            CONTINUE
```

```
END-IF
```

The '@%f@' in the case in which Structural Adjustment Action Vector's Action name is 'Key Duplicate' and its Action Operator is 'KYTP' is an identifier of the Definitive Identifier 'Reference File requiring Duplicate Chain' (that is, Reference File requiring to create data code of the Word belonging to Final Object File based on the word belonging to plural records on the same File), and the '@%i@' is an access key to the File. Accordingly, in case of the File with such conditions having the File name 'Conversion Value Standard Ledger' and the Definitive Identifier 'UGECD100', it becomes as follows:

@%f@=UGECD 100

and, when the access key to the File is 'Factory Code' and the Word Identifier is 'FACTCD', it becomes as follows:

@%i@=FACTCD

So, when the Action name is 'Mix Flag Set' and the Action Operator is 'MIXF', the codes of the logic of the 'Execute' (step 10405), 'Acceptance Process (step 10407) and 'Refusal Flag Set' (step 10407) are univocally determined as follows:

```
*    --<Acceptance Judgment>--
          IF W03-UGECD100-RD-MIX-FLG OF CTL-BOX
          = W03-UGECD100-RD-MIX-FLG OF CTL-BOX
*    --<Acceptance Process>--
               CONTINUE
*    --<Refusal Process>--
        ELSE
               CONTINUE
          END-IF
```

The meaning of these codes is to end the process unconditionally after the executing process.

Next, for example, in case of the Structural Adjustment Action Vector, when the Action name is 'Intermediate Area Duplicate' and the Action Operator is 'MISF', the '@%M@' univocally becomes Definitive Identifier of the 'Reference File requiring Duplicate Chain' (that is, Reference File requiring to create data code of the Word belonging to Final Object File, based on the Word belonging to plural Records on the same File). Therefore, when a File possessing such conditions has a File name 'Conversion Value Standard Ledger' as well as a Definitive Identifier 'UGECD100', it becomes as follows:

@%M@=UGECD100

Accordingly, Program Identifier with its Action name 'Key Duplicate' and its Action Operator 'MIXF' is univocally determined as follows:

```
P3-UGECD100-MISF-SEC SECTION.
P3-UGECD100-MISF-SEC-START.
```

Next, similarly when Structural Adjustment Action Vector's Action name is 'Intermediate Area Duplicate' and its Action Operator is 'MISF', the 'Execute Process' (step 10403) becomes as follows, if expressed as Program Template in COBOL:

```
IF W03-@%f@-RD-MIX-FLG OF CTL-BOX NOT = '1'
AND W3-@%f@-RD--MISF = LOW-VALUE
```

The '@%f@' in this Program Template is an identifier of the Definitive Identifier of the 'Reference File requiring Duplicate Chain' (that is, Reference File requiring to create data code of the Word belonging to Final Object File by based on the word belonging to plural records on the same File). Accordingly, in case of the File with such conditions having the File name 'Conversion Value Standard Ledger' and the Definitive Identifier 'UGECD100', it becomes as follows:

@%f@=UGECD100

So, the codes for the 'Execute' (step 10401) with its Action name 'Intermediate Area Duplicate' and Action Operator 'MISF' is univocally determined as follows:

```
IF W03-UGECD100-RD-MIX-FLG OF CTL-BOX NOT = '1'
AND W03-UGECD100-RD-MISF = LOW-VALUE
```

The meaning of these codes is as follows: It implements checks on no setting of the Mix Flag as well as if data code is not present in the duplicate-destination Intermediate Area.

Next, similarly when Structural Adjustment Action Vector's Action name is 'Intermediate Area Duplicate' and its Action Operator is 'MISF', the codes for ''Execute' (step 10403) become as follows, if expressed as Program Template in COBOL:

```
MOVE W03-@%f@-RD TO W03-@%f@-RD-MISF
```

The '@%f@' in this Program Template is an identifier of the Definitive Identifier of the 'Reference File requiring Duplicate Chain' (that is, Reference File requiring to create data code of the Word belonging to Final Object File by based on the word belonging to plural records on the same File). Accordingly, in case of a File with such conditions having the File name 'Conversion Value Standard Ledger' and the Definitive Identifier 'UGECD100', it becomes as follows:

@%f@=UGECD100 So, the codes for the 'Execute' (step 10401) with its Action name 'Intermediate Area Duplicate' and its Action Operator 'MISF' is univocally determined as follows:

MOVE W03-UGECD100-RD TO W03-UGECD100-RD-MISF

The meaning of these codes is as follows: The data code in the already read-in data field identified by the identifier 'UGECD100' which is prepared in the group item identified by the identifier 'W03-UGECD100-RD' shall be duplicated in bundle into the data field of the Intermediate Area identified by the identifier 'UGECD100' which is prepared in the group item identified by the identifier 'W03-UGECD100-RD-MISF.'

Next, similarly, when Structural Adjustment Action Vector's Action Name is 'Intermediate Area Duplicate' and its Action Operator is 'MISF', the codes of the logic of the 'Execute' (step 10405), 'Acceptance Process (step 10407) and 'Refusal Flag Set' (step 10407) become as follows:

```
*    --<Acceptance Judgment>--
         IF W03-@%f@-RD-MISF = W03-@%f@-RD-MISF
*    --<Acceptance Process>--
              CONTINUE
*    --<Refusal Process>--
         ELSE
              CONTINUE
         END-IF
```

The '@%f@' in the case, in which Structural Adjustment Action Vector's Action name is 'Intermediate Area Duplicate' and its Action Operator is 'MISF,' is an identifier of the Definitive Identifier of the 'Reference File requiring Duplicate Chain' (that is, Reference File requiring to create data code of the Word belonging to Final Object File by based on the word belonging to plural records on the same File), and the '@%i@' is an access key to the File, and the '@%i@' is an access key to the File. Accordingly, in case of the File with such conditions having the File name 'Conversion Value Standard Ledger' and the Definitive Identifier 'UGECD100', it becomes as follows:

@%f@=UGECD100

and, when the access key to the File is 'Factory Code' and the Word Identifier is 'FACTCD', it becomes as follows:

@%i@=FACTCD

So, when the Action name is 'Mix Flag Set' and the Action Operator is 'MIXF', the codes of the logics 'Execute' (step 10405), 'Acceptance Process (step 10407) and 'Refusal Flag Set' (step 10409) are univocally determined as follows:

```
*    --<Acceptance Judgment>--
         IF W03-UGECD100-RD-MISF
         = W03-UGECD100-RD-MISF
*    --<Acceptance Process>--
              CONTINUE
*    --<Refusal Process>--
         ELSE
              CONTINUE
         END-IF
```

The meaning of the codes is to end the process unconditionally after the Execute Process.

Next, for example, when the Routing Action Vector's Action name is 'Duplicate Chain Route Setting' and the Action Operator is 'MXRT', the '@%M@' univocally becomes Definitive Identifier of the 'Reference File requiring Duplicate Chain' (that is, Reference File requiring to create data code of the Word belonging to Final Object File, based on the Word belonging to plural Records on the same File). Therefore, when the File possessing such conditions has a File name 'Conversion Value Standard Ledger' as well as a Definitive Identifier 'UGECD100', it becomes as follows:

@%M@=UGECD100

Accordingly, Program Identifier with its Action name 'Duplicate Chain Route Setting' and its Action Operator 'MXRT' is univocally determined as follows:

```
P3-UGECD100-MXRT-SEC SECTION.
P3-UGECD100-MXRT-SEC-START.
```

Next, similarly, when Routing Action Vector's Action name is 'Duplicate Chain Route Setting' and Action Operator is 'MXRT', the 'Execute' (step 10401) becomes as follows, if expressed in COBOL as Program Template:

```
IF
W03-@%f@-RD-MIX-FLG OF CTL-BOX = '1'
    AND W03-@%f@-RD-FLG OF CTL-BOX = '1'
```

The '@%f@' in this Program Template is an identifier of the Definitive Identifier of the 'Reference File requiring Duplicate Chain' (that is, Reference File requiring to create data code of the Word belonging to Final Object File by based on the word belonging to plural records on the same File). Accordingly, in case of the File with such conditions having the File name 'Conversion. Value Standard Ledger' and the Definitive Identifier 'UGECD100', it becomes as follows:

@%f@=UGECD100

So, the codes for the 'Execute' (step 10401) with its Action name 'Duplicate Chain Route Setting' and its Action Operator 'MISF' is univocally determined as follows:

```
IF W03-UGECD100-RD-MIX-FLG OF CTL-BOX = '1'
AND W03-UGECD100-RD-FLG OF CTL-BOX = '1'
```

The meaning of these codes is to implement checks on the setting of Mix Flag as well as on Execute Done of the reference process of the Reference File.

Next, similarly, when Routing Action Vector's Action name is 'Duplicate Chain Route Setting' and Action Operator is 'MXRT', the codes for 'Execute' (step 10401) become as follows, if expressed in COBOL as Program Template:

```
MOVE '@%f@W04' TO T1-PALLETID OF CTL-INF
```

The '@%f@' in this program template is an identifier of the Definitive Identifier of the 'Reference File requiring Duplicate Chain' (that is, Reference File requiring to create data code of the Word belonging to Final Object File by based on the word belonging to plural records on the same File). Accordingly, in case of the File with such conditions having the File name 'Conversion Value Standard Ledger' and the Definitive Identifier 'UGECD100', it becomes as follows:

@%f@=UGECD100

So, the codes for 'Execute Process' (step 10403) with its Action name "Duplicate Chain Route Setting' and its Action Operator 'MXRT' is univocally determined as follows:

```
MOVE ' UGECD100W04' TO T1-PALLETID OF CTL-INF
```

The meaning of these codes is as follows: An identifier of W04 Pallet which creates Final Object File shall be set into the data field that records the next-to-activate Pallet Identifier identified by the identifier 'T1-PALLETID' which is prepared in the group item identified by the identifier 'CTL-INF.' Next, similarly, when Routing Action Vector's Action name is 'Duplicate Chain Route Setting' and Action Operator is 'MXRT', the code column of the logic of the 'Acceptance' (step 10405), 'Acceptance Process' (step 10407) and 'Refusal Flag Set' (step 10409) become as follows:

```
*   --<Acceptance Judgment>--
        IF T1-PALLETID OF CTL-INF = T1-PALLETID OF CTL-INF
*   --<Acceptance Process>--
            MOVE ' 1' TO P64U-3-END OF CTL-BOX
*   --<Refusal Process>--
        ELSE
                CONTINUE
        END-IF
```

The '@%f@' in the case in which Structural Adjustment Action Vector's Action name is 'Intermediate Area Duplicate' and its Action Operator is 'MISF' is an identifier of the Definitive Identifier of the 'Reference File requiring primarily Duplicate Chain' (that is, Reference File requiring to create data code of the Word belonging to Final Object File by based on the word belonging to plural records on the same File), and the '@%i@' is an access key to the File. Accordingly, in case of the File with such conditions having File name the 'Conversion Value Standard Ledger' and the Definitive Identifier 'UGECD100', it becomes as follows:

@%f@=UGECD100

and, when the access key to the File is 'Factory Code' and the Word Identifier is 'FACTCD', it becomes as follows:

@%i@=FACTCD

So, when the Action name is 'Mix Flag Set' and the Action Operator is 'MIXF', the codes of the logics 'Execute' (step 10405), 'Acceptance Process (step 10407) and 'Refusal Flag Set' (step 10409) are univocally determined as follows:

```
*   --<Acceptance Judgment>--
```

```
        IF W03-UGECD100-RD-MISF
        = W03-UGECD100-RD-MISF
*   --<Acceptance Process>--
            CONTINUE
*   --<Refusal Process>--
        ELSE
            CONTINUE
        END-IF
```

The meaning of these codes is to end the process unconditionally after the Execute Process.

<<T1's W04 Homogeneity Vector>>

The various logical structural points of T1's W04 Homogeneity Vector based on the principle's theoretical base are as shown in Fig. 105.

The 'T1's W03 Homogeneity Vector' L4(f,i) is one component consisting of Scenario Function T1 which is expressed in the following expression, and it is a function which determines a software, regardless of its business operation, its application field, its programming language, and its installment environment. Its Independent Variables are only 'Definitive Identifier' r, which identifies Reference File, Definitive Identifier, which identifies a final objective File, and an identifier i of Words belonging to those Files, only.

$$T1(f) = \Phi 1(\{\Phi p(rf, 2) \{ \quad ,L2(r, i) , P2(r, j) , P2(j)\}\}r$$

$$+ \Phi p(rf, 3 \{Y3(r, i), L3(r, i), L3(f, i) , P3(j)\}$$

$$+ \Phi p(fr, 4) \{Y3(f, i) , L4(f, j), P4(f, j) , P4(j)\} f)$$

The flowchart shown in Fig. 105 is a logical structure of the functions of 'T1's W04 Homogeneity Vector', that is, L4(f,i).

The L4(f,i) (10502) in the flowchart become as follows, if expressed as Program Template in COBOL:

```
L4-@%f@-@%i@-UP-SEC SECTION.
L3-@%f@-@%i@-UP-SEC-START.
```

The '@%f@' in the Program Template is an independent variable part of Definitive Identifier f, and the '@%i@ part is an independent variable of Word Identifier i. Hereupon, the Definitive Identifier r is an identifier of File which records data code used as a base to create data code of Final Object File.

Accordingly, for example, when Definitive name is 'Conversion Value Standard Ledger', and Definitive Identifier belongs to the 'UGECD100' Final Object File, and Word name is 'Manufacturing Costs Total Standard Value', and Word Identifier is 'MKELVL', it becomes as follows:

@%f@=UGECD100, @%i@ = MKELVL

So, Program Identifier is univocally determined as follows:

```
L4-UGECF120-MKELVL-UP-SEC SECTION.
L4-UGECF120-MKELVL-UP-SEC-START.
```

Next, the 'Empty' (step 10501) is a check on conditions to execute a logic which creates the Self data code into the data field identified by Word Identifier which identifies the Homogeneity Vector, and it becomes univocally as follows, by the Word Identifier:

IF <u>W04.@%f@-@%i@-UP</u> = <u>W04.@%f@-@%i@-UP</u>

For example, when the Definitive name is 'Manufacturing Costs Total Standard Ledger', and the Definitive Identifier belongs to the Final Object File 'UGECD100', as well as the Word name is 'Manufacturing Costs Total Standard Value', and the Word Identifier is 'MKELVL', it becomes as follows:

@%f@=UGECD100, @%i@ = MKELVL

So, it is determined as follows:

IF <u>W04.UGECD100.MKELVL-UP</u> = <u>W04.UGECD100.MKELVL-UP</u>

The meaning of these codes is as follows: The 'Empty' check (step 10501) of T1's W04 Homogeneit Vector concerned with the data field which belongs to the File identified by the identifier 'UGECD100' and is identified by the identifier 'MKELVL' shall proceed unconditionally to the Self Chain.

Next., the 'Self Chain' (step 10503) is a logic to create the Self data code into the data field identified by the Word Identifier which identifies the Homogeneity Vector, and it becomes univocally as follows, by the Word Identifier:

In case of Words belonging to Final Object File,

MOVE W03.@%f%-@%i@-UP TO W04.@%f@-@%i@

Thus, for example, when the Definitive name is 'Conversion Value Standard Ledger', and Definitive Identifier belongs to Final Object File 'UGECD100,' as well as the Word name is 'Manufacturing Costs Total Standard Value' and the Word Identifier is 'MKELVL', it becomes as follows"

@%r@=UGECD100

@%i@=MKELVL

So, the codes for the 'Self Creation' (step 10503) is univocally determined as follows:

MOVE W03.UGECD100.MKELVL-UP TO W04.UGECD100.MKELVL-UP

The meaning of these codes is as follows: The 'Self Creation' (step 10503) of the T1's W04 Homogeneity Vector concerned with the data field which belongs to Final Object File identified by the identifier 'UGECD100' and is identified by the identifier 'MKELVL' shall duplicate the content of the data field on W03 Pallet identified by the Self-identifying identifier into the data field on W04 Pallet identified by the Self-identifying identifier.

The next 'Acceptance' (step 10505) and 'Acceptance Process' (step 10507) is a logic to check if Self Creation is materialized or not and to implement Acceptance Process in the case of the materialization of Self Creation, and it becomes univocally as follows, by Word Identifier:

In case of Words belonging to Final Object File,

```
*   --<Acceptance Judgment>--
        IF W04@%f@-@%i@-UP = W04@%f@-@%i@-UP
*   --<Acceptance Process>--
        CONTINUE
```

For example, when the Definitive name is 'Conversion Value Standard Ledger', and the Definitive Identifier belongs to Final Object File of 'UGECD100', as well as the Word name is 'Manufacturing Costs Total Standard Value' and the Word Identifier is 'MKELVL', it becomes as follows"

@%r@=UGECD100

@%i@=MKELVL

So, the codes for the 'Self Creation' (step 10503) is univocally determined as follows:

```
*   --<Acceptance Judgment>--
        IF W04-UGECD100.MKELVL-UP =W04-UGECD 100.MKELVL-UP
*   --<Acceptance Process>--
          CONTINUE
```

The meaning of these codes is that it unconditionally acknowledges Acceptance.

<<T1's W04 Action Vector>>

The various points of the logical structure based on the principle's theoretical base possessed by T1's W04 Action Vector is as per shown in Fig. 106.

The 'T1's W04 Action Vector' P4(f) is one element consisting of Scenario Function expressed by the following expression, and, it is a function which determines a software, regardless of its business, its application field, its programming language, and its installment environment. Its Independent Variable is only the Definitive Identifier f of Final Object File.

$$T1(f) = \Phi 1(\{\Phi p(rf, 2) \{\quad , L2(r, i) , P2(r, j) , P2(j)\}\} r$$

$$+ \Phi p(rf, 3) \{Y3(r, i) , L3(r, i) , L3(f, i) , P3(j)\}$$

$$+ \Phi p(fr, 4) \{Y3(f, i) , L4(f,j), P4(f, j) , P4(j)\}\} f)$$

The flowchart shown in Fig. 106 indicates a Logical Structure of the function P4(f) of the T1's W04 Action Vector.

The P4(f) (10602) in the flowchart becomes as follows, if expressed in COBOL as Program Template:

P4-@%M@-@%j@-SEC SECTION.

P4-@%M@-@%j@-SEC-START.

The '@%M@' in the Program Template is the Independent Variable part of Definitive Identifier M, and also the '@%j@' is the Independent Variable part of the Action Operator j. Hereupon, Definitive Identifier M is univocally determined as Definitive Identifier concerned with Logical Record which identifies the medium subjected as an object for operation, in case of the Command Action Vector. On the other hand, in case of Routing Action vector, Structural Adjustment Action Vector and Work Requirement Action vector, it is univocally allocated by, for example, the 'ME' identifier which means a medium of Main Memory.

Also, as for Action Vector j, actions of the following kinds are necessary in case of the T1's W04 Action Vector:

XL. Command Action Vector
XLI. Entry Command Action Vector against Final Object File
XLII. Close Command Action Vector against Final Object File
XLIII. Data Field Initialize
XLIV. Various Flags Initialize
XLV. Mix Flag Initialize
XLVI. Routing Action vector
XLVII. Restart Chain

Therefore, as to Command Action Vector, when its Action name is 'Conversion Value Standard Ledger Entry' and its Action operator is 'WRITE', the @@%M@' becomes primarily Definitive Identifier 'UGECD100' of the 'Conversion Value Standard Ledger', it becomes as follows:

```
@%M@=UGECD100
@%j@=WRITE
```

Thus, Program Identifier is univocally determined as follows:

```
P4-UGECD100-WRITE-SEC SECTION.
P4-UGECD100-WRITE-SEC START.
```

Next, similarly, when Action name of the Command Action Vector is 'Conversion Value Standard Ledger Registration,' the 'Execute' (step 10601) becomes as follows, if expressed in COBOL as Program Template:

```
IF W04-@%M@-@%j@-FLG OF CTL-BOX NOT ='1'
AND W03-@%f@-RD-MIX-FLG OF CTL-BOX ='1'
```

Accordingly, when T1's W04 Action Vector's Action name is 'Conversion Value Standard Ledger Registration' and its Action Operator is 'WRITE', the '@%M@' becomes univocally Definitive Identifier 'UGECD100' of the 'Conversion Value Standard Ledger', and it becomes as follows:

```
@%M@=UGECD100
@%j@=WRITE
```

Thus, the codes for the 'Execute' (step 10601) is univocally determined as follows:

```
IF W04- UGECD100-WRITE-FLG OF CTL-BOX NOT = '1'
AND W03-UGECD100-RD-MIX-FLG OF CTL-BOX = '1'
```

The meaning of these codes is as follows: It checks on no setting of the Flag identified by the identifier 'W04-UGECD100-WRITE-FLG' which is prepared in the group item identified by the identifier 'CTL-BOX,' that is, Execute Done Flag of Command Action Vector which manages the 'Conversion Value Standard Ledger Registration,' and also checks on the setting of Mix Flag and if the Registration of File is allowed .

Next, similarly, when Action name of the Command Action Vector is 'Conversion Value Standard Ledger Registration,' the 'Execute' (step 10603) becomes as follows, if expressed in COBOL as Program Template:

```
*   --<Process>--
        MOVE W04.@%f@-UP TO WFL-@%f@ OF WFL-BUF
*   --<SQL Execute
        EXEC SQL
            UPDATE @%f@
        END-EXEC
```

The '@%f@' in this Program Template is an identifier of Final Object File of T1's Scenario Function. Accordingly, when the Final Object File's name is 'Conversion Value Standard Ledger' and the Definitive Identifier is 'UGECD100', the code column of the 'Execute Process' (step 10603) is univocally determined as follows:

```
*   --<Process>--
        MOVE W04- UGECD100-UP TO WFL- UGECD100 OF WFL-BUF
*   --<SQL Execute
```

```
EXEC SQL
    UPDATE UGECD100
END-EXEC
```

The meaning of these codes is that it is a logic of EXEC SQL to issue Update Direction thereby transferring the data which was auto-generated by W04 Homogeneity Vector to the buffer of File.

Next, similarly, when the Action name of the Command Action Vector is 'Conversion Value Standard Ledger Registration,' the 'Execute' (step 10605), 'Acceptance Process' (step 10607), and 'Refusal Flag Set' (step 10609) become as follows, if expressed in COBOL as Program Template:

```
*   --<Acceptance Judgment>--
        IF W04-@%f@-STS OF CTL-BOX = SPACE
*   --<Acceptance Process>--
            MOVE ' 1' TO W04-@%f@-UPD-END OF CTL-BOX
*   --<Refusal Process>--
        ELSE
            MOVCE '1' TO W04-@%f@-UPD-ERR OF CTL-BOX
        END-IF
```

The '@%f@' in this Program Template is an identifier of Final Object File of T1's Scenario Function. Accordingly, when the Final Object File's name is 'Conversion Value Standard Ledger' and the Definitive Identifier is 'UGECD100', the codes of the logic of the 'Execute' (step 10605), 'Acceptance Process' (step 10607), and 'Refusal Flag Set' (step 10609) are univocally determined as follows:

```
*   --<Acceptance Judgment>--
        IF W04-UGECD100-STS OF CTL-BOX = SPACE
*   --<Acceptance Process>--
            MOVE '1' TO W04-UGECD100-UPD-END OF CTL-BOX
*   --<Refusal Process>--
        ELSE
            MOVCE '1' TO W04-UGECD100-UPD-ERR OF CTL-BOX
        END-IF
```

The meaning of these codes is as follows: If the results of the Update Direction action are normal, it records as normal, or if the results of the Update Direction action are abnormal, it records as abnormal.

Next, in Structural Adjustment Action Vector, for example, when the Action name is 'W03 Reference Data Field Initialize' and the Action Operator is 'PCR1', the @%M2' becomes Definitive Identifier possessing the object data field. Accordingly, when the File name is 'Conversion Value Standard Ledger' and the Definitive Identifier is 'UGECD100', it becomes as follows:

```
    @%M@=UGECD100
```

Thus, in Structural Adjustment Action Vector, for example, when the Action name is 'Data Field Initialize' and the Action Operator is 'PCR1', the codes are univocally determined as follows:

```
    P4-UGECD100-PCR1-SEC SECTION.
    P4-UGECD100-PCR1-SEC START.

*   --<Execute Judgment>--
        IF W03-UGECD100-RD-MIX-FLG OF CTL-BOX NOT = '1'
*   --<Process>--
            MOVE LOW-VALUE TO UGECD100-BUF OF W03-BUF
*   --<Acceptance >--
            IF UGECD100-BUF OF W03-BUF = UGECD100-BUF OF W03-BUF
*   --<Acceptance Process >--
                CONTINUE
*   --<Refusal Process>--
                ELSE
                    CONTINUE
                END-IF
            END-IF
```

P4-PCR1-RS5-SEC-EXIT.
**EXIT.**

Hereupon, details of steps 6413, 6415, and 6417 are explained hereunder.

<Mounting>

As a result of the above procedures, (the source program) have been determined, which are to make up all components consisting of Scenario Function as programs. The mounting means a work to turn codes into an executable format on a computer, by translating (compiling or assembling) into a machine language. As far as this work is concerned, the present adopts the same traditional method.

<Simple Unit Test>

The simple unit test means a work to verify, per independent component, that is, a simple unit, on whether the code satisfies the specification attached to such simple unit, or not. Speaking from this definition, the concept of the simple unit test cannot be applied to the program produced by the traditional method. This is because the program by the traditional method is not independent by itself, and is always bound by the dependent relation ship with the other programs.

For example, a function (program) which realizes a certain functionality requires argument, and the value of the argument is to be set by the other program. Therefore, without the other program, it is impossible to implement the verification of a function that realizes a certain functionality.

On the other hand, as to LYEE's programs, the logical-coupling part of any programs only involves Duplication Vector, and the Duplication Vector does duplication of the data enclosed in the Self's Word. All other than this Duplication Vector is data-coupling, therefore they are independent programs. For example, in case of Word in which its Definitive name is Conversion Value Standard Ledger Screen and its Definitive Identifier belongs to 'UGECG907' Screen, as well as its Word name is factory and its Word Identifier is 'FACTCD', a series of codes of Homogeneity Vector mounted on W03 Pallet becomes as follows:

'*******************************************************`

```
Private Sub L3_UGECG907_FACTCD()
'Empty Judgment
 If W03.UGECG907.FACTCD <> "" Then
   Exit Sub
 EnD If
'Self Creation
 W03.UGECG907.FACTCD = WFL_UGECF_FACTCD
'Acceptance Judgment
 If W03.UGECG907.FACTCD <> "" Then
   Exit Sub
 EnD If
' Adding the number of times of Restart
 W03_UGECG907_FACTCD_CNT = W03_UGECG907_FACTCD_CNT + 1
'Restart
 If W03_UGECG907_FACTCD_CNT < W03_RECALL_MAX Then
'Restart Flag Set
   W03_RECALL_FLG = True
EnD If
'Refusal
 If UGECG907_FACTCD_CNT >= W03_RECALL_MAX Then
'Refusal Flag Set
   W03.UGECG907.FACTCD_Non = True
 EnD If
EnD Sub
'**************************************************
```

There is no argument at all in these codes. Therefore, if data field only exists, these codes can operate. There codes logic satisfies various points of the principle's theoretical base, so the verification of the logic is unnecessary. Consequently, parts to be confirmed upon the simple unit test are limited only to whether the Self Creation logic, to which the prescribed calculating expression is given, actually reflects it or not.
That is, as the various points of the principle's theoretical base of the Self Creation logic, two ways of substitution are permitted, that is, the substitution from the Self's data field belonging to File and the substitution of the content obtained by the calculating expression, thus the content of the simple unit test is whether the various points are satisfied or not. The content of the practical work of the LYEE's simple unit test is, at most, up to this level.
After all, the procedure of the program's coupling test like this traditional method is unnecessary at all in LYEE.

<Tuning>

Tuning is a work to delete unnecessary codes, as in a situation where the LYEE mounted program, for example, presses on the main memory capacity of the operating computer.
As already explained, the LYEE's Logical Structure is based on the premise of Consciousness Unit-Link in which the 'Kuh' is established. The Consciousness Unit-Link, in which the 'Kuh' is established is a state in which the semantic space diameter of the infinite structure of Consciousness Logical Atom becomes approximately equivalent to the semantic space diameter of Equivalent Logical Atom consisting of the structure. By being infinite structure, the Logical Structure of LYEE possesses a logic to grasp all phenomena.
In contrast, actual information processing system is fulfilled with the pre-conditional functionality based on the functions of limited phenomena, that is, finite sets. For this reason, in LYEE's program, unnecessary codes can happen to be contained. For example, such logic as 'Restart Counter+1', 'Restart?' and 'Restart Flag Set' that are mounted on W02 Pallet is unnecessary to the Neumann-type computer and the OS based on it, so they can be deleted without trouble.
Also, each of Homogeneity Vectors can be mounted regardless of the execution sequence and the result is guaranteed. Depending upon the way of placement, however, the process is implemented in duplication. In this instance, it is possible to prevent the duplication of the process by changing the way of placement (for example, to place Homogeneity Vectors possessing calculation expression into the later execution turn), without tampering the Logical Structure of each Homogeneity Vector.
The work for such tuning has been implemented by the traditional method on a try-and-error basis at the beginning of development of design as well as at the last stage of the development, but, in case of LYEE, it is featured that the work can be implemented mechanically.
The present invention is not limited to the embodiment mentioned above, rather it is applicable to a variety of different forms, applications and extensions within the range of the inventive conceptions of this invention.
For example, in the aforementioned explanation, the way of thinking concerned with this invention was explained mainly as a method of software determination (generation), but it is self-explanatory from what was already described that it can be realized, as it is, also as a method of software utilization, software storage, software transplant, software management, software installment, software development, software development management, and software operational management. Additionally, it can be materialized, of course, as a medium that records software which realizes the all functionality mentioned above, or as signals with which the related software has been made into electronic data, and so on.
Also, the aforementioned explanation was mainly concerned with the method of realizing the thinking of this invention as a software. It is also possible, of course, to realize the way of thinking of this invention as an apparatus.
Fig. 132 is a diagram to show one example of the system configuration of the apparatus which realized by the present invention.
What is called 'Word' by the present invention means 'a unit to materialize semantic quality'. Thus, this invention can be applied to whatever computer process that can regulate 'Word'. The existence of 'semantic quality' means that the Word was transmitted, embodied, and recognized by a human, and depending upon the mode of the process by computers to be handled, a variety of matters can become a 'unit' in which semantic quality materializes.
For example, in the normal business routine, data is displayed on the personal computer screen or Printouts, or the input is made from the computer screen to obtain information needed for business, thereby communicating it for the business to be done. In this instance, by designating an identifier of the data field displayed on the computer screen and Printouts which are handled inside the computer as 'Word', this invention can be applied as it is.
Also, for example, as shown in Fig. 133, in case of the mechanical controlling system, the controls of devices are realized by judging the state of devices based on signals sent from devices. In this instance, by regarding various kinds of these signals as 'Word', this invention is applicable as it is. Also, for example, as shown in Fig. 174, in creating a software which displays a digital clock, this invention can be applicable as it is by taking the unit lines (Line 1 to Line 7), the lower blank column displayed as 'NOM', and each of the buttons 'START' and 'END', in the same Fig., as the 'Word'.

In addition, upon the creation of the programs above, the structure of the program, as above-mentioned, shall never change, regardless of any systems as well as any language environments, thus, automatic creation of programs is eventually enabled at ease. To avoid misunderstanding, however, the main purpose of the present invention is not the automatic creation of programs. Rather, it intends to elucidate the essence of software, and based on this essence it sought for a 'correct solution' of a software. As a result, it was found that all programs are in possession of the structure that can be ruled by the aforementioned W02 Pallet, W03 Pallet, W04 Pallet and Pallet Chain Function, thereby bringing about many effects, one of which is, the automatic creation of programs.

For example, by using a TOOL concerned with the present invention which has already been developed, all the content of definitions made against the Independent Variable of the Scenario Function of the present invention is registered into Data Base as software assets, from which a program source code can be freely created at any time. Also, upon the maintenance of the information system, if the contents of the registered software assets are changed, the program source code corresponding to the results of the changes can be created as a consequent effect. By so doing, the development work of an information system will only become a work to define independent variables, thereby removing us of the work of designing and creating programs.

Fig. 134 to Fig. 152 are diagrams to show an actual case of a series of the software development by using LyeeALL, which is one example of such TOOLS.

Also, in addition, the present invention can be applied to any languages, if they are computer languages that can describe programs per Word, and the program structure per Word has an identical structure for any Words, thus the present invention can be applied to whatever computer languages can describe programs per Word.

Accordingly, practically by preparing, programs per Word as Template in advance, the actual program creation activity using this invention is replaced by the work to create a program source code from the software assets by using a language suited to the Template. This means, after all, the program source code is disposable, and when this invention is applied, the program source code shall not be software assets. The program source code will become independent of the kinds of computer, and it shall change completely the industry's sense of value that have regarded even programs of inferior maintainability as software assets as a matter of course.

As a result, because the maintenance requirements of information processing system must be classified by work functionality to implement the changing of work after detail examination of changing parts needed in the existing system, the traditional maintenance method of information processing system required the following steps for the work to examine "what part of the many programs should be changed" ;

- Dependent on those who know well the existing system,
- The examination work occupying a greater weight in the work involved, whereas in the present invention applied to, the following will be achieved :

    1. The maintenance requirements of information processing system can be replaced by the operational function that is a simple structure of data (Words) used in the work'.
    2. When a data (Word) is added, it may as well add programs of a unit of the data (Word) to be added.
    3. When a data (Word) is changed, it may as well change only programs a unit of the data (Word) to be added.
    4. Anybody can understand the program of a unit of data (Word).

Thus, innovative and surprising effects are bought about into maintenance works.

Further, in the foregoing explanation, explained as an example was the case of realizing the idea concerned with the present invention mainly via software. But the idea shall not be limited to software. For example, as aforementioned, the Tense Control Vector is a vector composed of a data field and a process logic, independent from each other per a unit of Word. This unit itself can be realized as LSI. Further, what establishes Unit-Link of those units (Pallet Function, Pallet Chain Function, etc.) can also be realized as LSI, thus, enabling the fabrication of a parallel computer which actualizes the present invention.

Also, further, in this instance, according to the idea concerned with the present invention, an inference scheme or a judgment-complimentary scheme shall be able to be realized which materializes only by data-coupling that deleted logical dependence relationship (logical coupling). That is to say that the traditional inference scheme took a tree structure, thus, a logical coupling, as a matter of course. In contrast, by means of the present invention, not only remaining with requirements for the number (N) of Words but also requirements of the number ($4xN^3$) of the Unit-Links can be presented as an information on an object to be judged. Therefore, An inference scheme and judgment complementary scheme shall be realized for creating new requirements that not been conceived so far.

Further, not referred in the above explanation, but by using the technical idea of the present invention to the solution for a visiting salesman's problem, it will bring about remarkable and unprecedented effects. That is, the traditional method was based on the aforementioned 'Given-orientation' (Given-ism), therefore it had to involve astronomic calculation. In contrast, LYEE concerned with the present invention is based on the "Self-orientation, so it is enough to make Self Creation at every visiting destination, create the time for meeting with the salesman and the distance (moving time) to a neighboring visiting destination, and the of salesman's shortest time visiting is a total of the time for those visits. The combination involved can be obtained by a combination that selects the number from the number of visiting destinations.

Also, not referred in particular in the aforementioned embodiment, in the software production by LYEE, the minimization of the capacity of software, which is a product, can be realized at ease. That is, in this invention, 'the requirement' is grasped as 'uncertain', while software can be determined even for such uncertain requirement. That is, no matter what kind of requirements take place, they can be accepted, and the elements that realize it are 'Restart', 'Refusal' and 'Self Creation'. In case of the limited environmental condition and requirement, however, it is possible to perform the optimization of the quality of program by mechanical procedure accorded in such condition.

This procedure is called tuning by this invention, and the tuning includes, for example, the following:

<1 Tuning for performance>

As an actual achievement of tuning in the HTML application case, the 155KB before tuning could be compressed to 66KB after tuning as follows:

- for not necessitating restart process - 40KB
- for not necessitating Duplication Vector- 12KB
- for not necessitating comment lines - 6KB
- for shortening the identifier length - 13KB
- for object arrangement -18KB

(Total -89KB)

< 2 Tuning for Work Requirement>

In accordance with the principle of software grasped by the present invention (Lyee), the Self Creation requirement can be guaranteed for its principle by the following verification:

Self Word (substitution) = Word of the same identifier belonging onto the other Definitive

and

Attribute check : Examination on the defined attribute (type, digits)

So, at the beginning of development, the work can be proceeded without the operational knowledge, and the tuning is implemented after the operation of software.

The Tense Control Vector which requires a large amount of development is not influenced by the execution environment condition, and it is extremely simple requiring mechanical work from the beginning to the end. Although the development amount is small, the determination of Action Vector is influenced by the mounting condition to the environment, so the determination of the mounting condition to the environment in the beginning is necessary in the beginning of development. Once it is determined, however, it will become an infrastructure. Thus, when it became a constant state, the influence upon the productivity can be ignored.

Also, Fig. 154 to Fig. 156 are diagrams to show Homogeneity Map, Area Mapping and a lookup table of Action Atoms for creating Pallets, which are concerned with one example in which an unprecedented gigantic effect was performed by actually applying the present invention to an off-line system.

Also, as aforementioned, in the above-mentioned embodiment of the present invention, the explanation was made by showing examples of the application of this invention so as to develop the software for corporate internal work process concerns, but the way of thinking of the present invention is not limited to such purpose alone but is applicable effectively to all kinds of software development, including other work process concerns (for example, seat reservation system, banking system, sales management system, etc.), not only inner-firm needs but also outside-organization's needs, that is, subcontract software development or, non-business area such as for communication controls, process controls as well as game software et al.

Also, if further observation is made, there are a variety of software exists, including:

- Assist software for business activity (seat reservation system, banking system, sales management system, employees management system, etc.)
- Assist software for functionality (communication controls function, process control function, software, control function, etc.) ; and.
- The other game software.

However, any of such logic is what was thought and produced by humans. In that sense, software may as well be said to be developed only for 'humans'.

On the other hand, as to the software developed by human's thinking that "Convenient, if things as such can be actually realized for people! Enjoyable!," the 'things as such' is meant by the procedures of the phenomena of shape, color and movement of things that become an object of software to be made, as well as the procedure of process and control leading to those phenomena (i.e., work, functionality et al), and they are matters of phenomenon and procedure recognized (given a meaning) by humans as such, and what cannot be recognized can never become an object for a software model.

Therefore, if grasped on a big scale, the so-called software may as well be referred to as 'what assists to realize the matters of reality as well as the matters desired to be as such'. The present invention is what is applicable to satisfy this definition, thus, it might well be thought of us equally applicable to all kinds of features humans perform, not limited to the area of the software development alone.

Also, originally, the present invention is what the inventor has obtained as a universal structure called Scenario Function, applicable any software to be realized regardless of its kind, by epistemological semantics, mathematics, the set theory in particular to theoretically induce 'logical atomism' of the Providence of Existence, then by applying the induced 'logical atomism' together with the spatial simulation mentioned above to the field of a software production. The software production ruled by this Scenario Function has already been proven to possess phenomenal effects from the industries' viewpoint, as described in the present invention. In light of this point of view, by applying the aforementioned 'logical atomism' to the other fields, for example, molecular biology, communication engineering, audio engineering, thereby hypothesizing the space type applicable to the field, a certain function (equivalent to the Scenario Function in the present invention) may be able to be obtained which can become a basic rule of the concerned field. This can be pointed out as a possibility. Reversibly speaking, the present invention has actually produced those possibilities.

7. Effects of Invention

As detailed above, according to the present invention, a software is composed of requirements definition documents embodied by humans in natural language and programs embodied by humans in codes, and either of them can be regarded as an existence phenomenon embodied in writing et al. And, the manner of the existence possesses mass and it is never a structure with physical properties, and it is 'what becomes a meaning.' The requirement definition document in case of the structure possessing mass and physical properties corresponds to design drawings et al, and the manner of the existence is 'what becomes a meaning' but the structure produced as a development result shall possess a mass as well as properties. The objective recognition of the physical properties can be acquired considerably accurately by natural science (that is, the physical properties, the mode or the composition of the structure of the development results can be defined as a theory or an equation).

Accordingly, to a certain extent in such a structure, requirement definition documents like design drawings et al can be conceived as a 'proposition' and the structure of 'development results' as a 'solution', likewise. (The reason for 'to a certain extent' is explained later). With the background of obtaining a 'solution' from the 'proposition', in a software, traditionally, the requirement definition documents has been grasped as a 'proposition' of software model and the programs have been grasped as its solution.

Nevertheless, in case of a software, as a reality, the establishment of algorithm (theory or equation) has never been realized which can univocally specify the relation between the requirement definition documents and the programs. The reason is nothing but software could not be grasped as what becomes a meaning and not a structure with physical properties and a mass.

The final form of the program of a software is described as a series of symbols (this is called source code list) for commands that define data structure concerned with the operation or function of the object of a software model, as well as for commands that operate data. This state shall be called the software structure.

Fig. 164 is an explanatory diagram arranged with a method to determine the software structure by the traditional methods and not the present invention (Lyee).

As shown in the Fig., in all the traditional methods other than the present invention (Lyee), it could not help always remaining with a method of finally settling the source code list through steps such as the designing by plural people called software engineers (16401), the programming (16403), and the tests (16405).

Fig. 165 is a diagram which explains the determination method of the software structure of Fig. 164, by the representation of mathematical equations.

Hereupon, if operation or function of the software modeling object is inscribed as symbol A (16501), the products of the individual steps of the software structure determination method can be inscribed as follows:

In case of external design, 0 = fi (A) ··· 16503

In case of internal design, I = fj (O) = fj (fi (A)) ··· 16505
In case of programming, C = fk (I) = fk (fj (A))) ··· 16507
In case of tests, T = fm (C) = fm (fk (fj (fi (A)))) ··· 16509

What are (16511) meant by these inscriptions, in terms of their characteristics, is that none of fm, fk, fj and fi, with functional inscription, possesses qualifications for being called as function, in a strict sense. This is because all of them are dependent upon experience, knowledge and ability of plural people called software engineers and not based on a principle of rule which allows reproduction. As a result, the final configuration of a program determined by this method will eventually a quality worsened by the pile-up of what is false, that is, experience, knowledge and ability of plural people called software engineers.

Fig. 166 is a diagram which explains the determination method of the software structure by this invention (Lyee), by the representation of mathematical equations.

This invention (Lyee) is nothing but an invention of a universal software structure determination function called Scenario Function (16603), and as shown in this Fig., it is a method of connecting the outright A (16501) located at the beginning of a software model and the program's final configuration C (16506) with a linear Function C=f (A).

Fig. 167 is a diagram which arranged a method to determine software structure in the present invention (Lyee).

As shown in this Fig. The items of development work of the present invention (Lyee) are extremely fewer compared with the traditional method shown in Fig. 164. At the same time, the way of its operation (16701) always remains to be a mechanical process from start to an end.

Fig. 168 is a diagram which explains the characteristics of the cases explained in Fig. 157 to Fig. 163 based on the development by the traditional method.

As shown in this Fig., structural characteristics (16803) of the source code list (16801) developed by the traditional development method are as follows: a series of symbols of this command group were not determined by a theoretical base with inevitability, and words for process control unique to software engineers are hiding between lines. This feature is an exact proof of the existence of a black box.

Fig. 169 is a diagram which explains the characteristics of the software structure developed by the present invention (Lyee).

As shown in this Fig., structural features of the source code list (16901) developed by the method based on the present invention (Lyee) are as follows: It was determined by a theoretical base with universality. So, words for process control unique to software engineers are never hiding between lines.

Fig. 170 is a diagram which explains the universality possessed by the present invention (Lyee).

As shown in this Fig., upon determining a consciousness model (17001) of the consciousness grasping a meaning, the present invention (Lyee), as aforementioned, makes definition by using concepts such as Logical Atom, Unit-Link, the Kuh, Non-Kuh, Coupling et al based upon set theory, and intends to realize axiomism as well as theoremism, thereby establishing the involved scheme axiomatically. Based on them, it establishes a Three-Dimensional-like Space Model called a Spatial Simulation in order to realize a program model possessing a law, then it has induced the aforementioned Scenario Function and its components (17005). That is, it intends to determine a software by the mathematical principle expression that possesses universality called Scenario Function.

Fig. 171 is a diagram which explains an image of a three-dimensional-like space model of the consciousness model based on the present invention (Lye). An individual explanation of this Fig. is omitted herein.

Fig. 173 is a diagram which arranged features of software structure based on both this invention (Lyee) and the traditional method.

As shown in this Fig., the traditional method (17201) forged a specification model of work or functionality A (16501) of the software model object by means of experience, knowledge and ability of plural people called software engineers, as well as a program PA without a specific structural quality based on the specification.

On the other hand, in case of the present invention (Lyee) (17201), the operation or the functionality A (16501) of the software model object is grasped from the point of the rule of Scenario Function Tu1 possessing universality, and a program TA1 has been developed which possesses a structure of correct solution.

Its features (17205) are as follows as explained in Fig. 157 to Fig. 163: The functionality as a result of the repeated operation TAn of Scenario Function TA1 is equivalent to the functionality concerned with Program PA which was developed by the traditional method (Tan≒PA), but they are not equivalent to each other in term of their source code lists. (TA1 ≠ PA). It proves the present inventions extraordinary superiority in performance scale, transparency et al compared with the other method.

Further, because variables of Scenario Function Tu1 are Words, it is also possible to provide conversion algorithm (17207) that can convert Program PA developed by the traditional method into Program TA1 possessing a structure of correct solution. Owing to this, programs developed by the traditional method shall be able to be converted into acquiring a larger yield scale and transparency, thus negative-legacy software can be revived.

Further, it is also possible to provide algorithm (17209) that converts Program TAlpossessing a revived correct solution structure into a program suited to a processing apparatus with an architecture different from the Neumann-type processing apparatus.

Now, software as being a meaning must always have had a cause (that is, 'Proposition') in its results, because requirement definition documents as well as programs are a result of the existence phenomenon (that is, 'Solution').

For example, each of characters in this Specification for Patent Application, in which characters are being lined up, is also an existence phenomenon, so it is 'Solution'. If these existence phenomena are analyzed from the 'meaning' viewpoint, however, the 'pro' part of 'proposition' means 'front', 'in place of', 'favoring', forward, etc., while the 'position' part means 'location', 'state', situation' etc.

That is, it cannot be said that either 'pro' or 'position' will inevitable be connected to a meaning intended by a person who uttered 'proposition' as one word.. That is, a concept of a meaning does not exist in the embodied character or existence phenomenon itself, but is a result of individual recognition by individual humans of 'something invisible which is combining between characters'. Embodied characters or existence phenomenon can be regarded only as 'what possesses a quality to become a meaning', that is, what is semantic quality by this invention.

'Something invisible which is combining between characters', that is, supposing there is a rule that is enabling 'pro' as well as next-neighboring 'position' to be existence phenomenon (a relation between the origin and the concerned existence phenomenon) even if a 'meaning' itself recognized personally by each human cannot be known, if the univocal algorithm (theory or equation) that can specify univocally both rules can be established so as to make up the former part to inevitably become 'pro' and the latter next-neighboring part to inevitably become 'position', it shall consequently satisfy the 'meaning' to desire to utter a word 'proposition', which is arbitrarily intended (recognized) by each of humans personally.

In the software development scene, if a concept of 'proposition' is considered to be a requirement (that is a meaning) contained in the depth of consciousness before being embodied it as an expression in character, drawing, etc., what was embodied as a realistic expression (that is, semantic quality) in character, drawing, etc. can be regarded as its 'solution'. So, to produce (develop) software which satisfies a requirement embodied as realistic expression (semantic quality) in character, drawing, etc. means to find a 'proposition' corresponding to the 'solution' and it shall be able to able to fulfill it by embodying a rule which induces a 'solution' from the 'proposition' in program composed of codes.

In all the other software production methods except for the present invention, the following steps had to be implemented, including 'basic design' 'functional design', 'detailed design', 'programming', 'simple unit test', 'coupling test' and 'overall test' all of which are based on personal 'communication' and 'agreement' between software engineers and those who want the software production. After all, the fact that all the other software production methods except for the present invention require personal 'communication' and 'agreement' proves that a base technology was not available for software.

As already detailed, the present invention has established the sole algorithm (theory or equation) from the relation between the 'solution', being all existence phenomenon and the 'proposition' corresponding to the 'solution.' This algorithm is the Scenario Function the present invention.

In that the Scenario Function is a function, the personal 'communication, and 'agreement' is not necessary, in the procedure of solving the function by placing something concrete into its independent variables. As a result, the present invention enjoys enabling to obtain a correct solution and not a personal solution.

Our mankind's traditional way of thinking is as follows: At first, the whole of 'proposition' shall be taken as established by means of an agreement; and the quality and the constitution of the whole is analyzed; then, the inside of it is fractionated into a certain number of elements as a 'solution' of a 'proposition' and the individual 'solutions' are additionally analyzed as a 'proposition', that is, the quality and the constitution of the whole is analyzed as a whole. Additionally the inside is again fractionated into a certain number of elements as a 'solution' of a 'proposition'. - that is, a functional convergent thinking method with the repetition of the aforementioned processes. Results of this way of thinking is also modern sciences. However, the way of thinking in the present invention tries to establish the whole, that is, without establishing the 'proposition', the present invention tries to establish from the 'solution' the 'proposition' synchronously, which possesses a complementary relationship with the 'solution', which can be called a 'synchronous way of thinking'.

The Scenario Function before being reduced means that, in human's requirement against anything not limited to software development requirement alone, a meaning nearest to the recognition of those who want it (that is, a requirement taking a root in the depth of consciousness, that is, a proposition) is inscribed into divisions of one-fifth of what was issued by the requiring person by taking individual words (that is, a solution) as a base.

That is, the terms uttered by a requiring person will be changed into five pieces of program for every term, and by simply filling the terms so as to satisfy all the combining relations between the Self and the Given in the Self Creation part concerned with W03 Homogeneity Vector, without interpreting the meaning of terms, it can single out the univocal requirement contents of the requiring person, which is detailed and with no inconsistency. Consequently, the specification is completed as a correct solution by a system of the 'functional solution', neither via personal 'communication' nor 'agreement' between software engineers at the software production site and those who want software production. - This is the effect obtained as a result.

The Scenario Function based on such invention can achieve many additional and effective features.

For example, it shall not require the creation of logic traditionally produced by software engineers, the operational input check logic in particular, and the creation of operational process control logic. That is, a program for every Word is determined simply by 'specifying the semantic quality establishment condition' which is Independent Variable of Scenario Function, and software development of information process system shall be completed simply by 'substituting' into the existing Synchronous Structure (that is, Scenario Function). This means it shall bring about a dramatic enhancement to the productivity of the system development.

The operational input check logic satisfying the requirement of those who want software production and the operational process control logic shall be created autonomously, if only 'Scenario Function is reduced onto a computer and implemented, so most of the design work for what has been traditionally called the up-stream part shall become unnecessary.

The Tense Control Vector possesses a determinate structure, perhaps, to be qualified enough to be the first and the last one in the software history, as a completely independent program. Features of such independence are to meddle autonomously and mutually with the components of the whole of software, and problems involved in the conventional software development and maintenance shall be improved inevitably from the root. One of such actual effects is the reduction of the steps and time for development activity, beyond imagination.

Also, the program is completed by substituting Word Identifiers concerned with terms uttered by those who want software production into Independent Variables of Scenario Function, and by fulfilling all terms so as to satisfy all link connections between the Self and the Given concerned with W03 Homogeneity Vector, without interpreting the meaning of terms, the requirement contents of the requiring person, which is detailed with no inconsistency, can be determined. That is, Development requirement and program can be determined at the same time.

As a result, the development cited by the traditional method shall change to large extent from its root. That is, Scenario Function is solved by substituting Word Identifier concerned with terms uttered by those who want software production into the Independent Variable of Scenario Function. During the process of solving it, those who want software production determine conditions for every Word, to realize Word's semantic quality. By expressing the every Word's condition and the solved result in a diagram 'Homogeneity Map', it becomes a specification document, and on the other hand, the program is also completed by a simple task of substituting Word Identifier and semantic quality-materializing conditions into the variable part of the Program Template.

That is, the following traditional tasks shall not be required, including the requirement arrangement work, the requirement detailing work, the preparation of program specifications, the internal process logic design et al. Consequently, it is made possible for those who want software production to create software by themselves. Then the software engineer's duty shall be limited to creating programs of 'Action Vectors' only, not inclusive of 'Work Requirement Action Vector'.

Also, according to this invention, software requirement and program structure are prescribed. Thus, if the Definitive of Screen et al and the Words belonging to it can be specified, anybody can understand software, even if he was not a developer. That is, the entity of all of 1-statements of a huge program shall be visible - such state can be produced, and by this, the maintenance task can be implemented at ease by anybody, thereby removing maintenance staff of the heavy work load required traditionally.

Also, according to this invention, all components consisting software are independent, the integration from the individual system to the unified one, and the segmentation from the unified system into the individual ones require lesser labor and work, thereby enabling a surprising saving of time, which can bring about effective impact on management of business.

Further, by the present invention, the preparation for the system planning can be promptly and proceeded with the management guideline. The reasons for that are as follows: It is not necessary to begin development of internal individual modules after fixing the whole system configuration, which means the coordination of the individual systems and the whole system is not required, thereby surprisingly reducing the development time involved. Such effect extends in multiplicity from the planning stage to the dramatic renovation of the development infrastructure.

Speaking specifically, a system can be built in the unit of Screen as operated by terminal users. W04 Pallet and W02 Pallet are prepared one for each Screen, and data field concerned with Word and Tense Control Vector are prepared in correspondence to Screen's Words. W03 Pallet is prepared one for the system, and in correspondence to all Words of all Screens and all KB (keyboard)s, data field concerned with Word and Tense Control Vector are to be prepared. This is all that is required as a process based on the present invention. Consequently, the system buildup work shall be made greatly easy.

Moreover, those created Pallet Functions, Pallet Chain Function et al are realized as codes with its Template simply substituted by identifiers as is. Also, even for any software and any Words, the identical structure is used, so they can be used as they are when another system is built, simply by providing a new correspondence between the existing system's identifiers and headers concerned with Words of a new system. Further, for the same reason, when individually built systems are integrated, it may as well simply merge them, not requiring re-arrangement of Words. A huge amount of time spent currently for such involved tasks shall become almost zero instantly.

Also, by the present invention, the modification of system is realized simply by implementing Adding and Changing such media as Screen and Printouts as well as Adding, Changing and Deleting Words (Programs are independent for every word, so no affect is caused to others), so the system modification can be realized matching the speed required for the business improvement involved. Further, in this instance, the format modification of Screen can be realized only by changing Tense Control Vector for every Words to be added or deleted, and the system modification is replaced by the work of adding DB Words as well as adding Screens and Words.

Further, by the present invention, the entity of software assets' shall change greatly. That is, the condition of all kinds of software are regularly determined in advance with the Synchronous Structure, so anybody can understand it by viewing Screen and Words, thereby allowing communication concerned with software conditions only by means of Screen, Printouts and Words belonging thereto, which means not needing any particular knowledge of works involved and information technology.

Because of this, program source code shall lose its qualifications as software assets. This is because once Screen, Printouts and Words belonging thereto that can be viewed by anybody are modified, anybody can create the same program source code. Software assets are replaced, according to the present invention, by such Definitive formats as Screen and Printouts, Homogeneity Map Diagrams, memorandum of semantic quality-materializing conditions et al, and as a result, it can lead to a great reduction and nullification of various costs concerned with the software.

Also, by the present invention, a revolutionary change in the way of estimating development costs, thereby producing profits not affected by the cost. Work steps ranging from designing to system test in the activity process flow are covered by the consistent thinking based on the Homogeneity Map, therefore, the point of view on the productivity is switched from system-creator's side to the user's side, thus causing a significant change in the way of estimating development costs from the traditional cost-orientation to a final product-orientation.

Speaking more specifically, the estimation format can be changed from the cost-orientation (man-month steps) to a final product-orientation (the number of Words). That is, according to the present invention, the structure of software is already known as Scenario Function, so it may as well determine independent variables (Words for a software model and their semantic quality-materializing conditions) of the functions involved and substitute them. So, the productivity scale is totally refreshed, and the traditional scale which was affected by the knowledge and ability of the creator's side represented as 'The development productivity = The number of all steps for development / all man-month steps for development' shall be converted to the scale which is not affected by the creating people, that is, 'The development productivity = The ability of determining Independent variables = The number of Words for a software model / the steps for determining semantic quality-materializing conditions', which is a new dimension of the sense of value based on the people who want the software production.

Further, as an effect of its extension, this invention brings about a renovation to the development cost estimate method with more adequacy. That is, by providing the following scale:
Development productivity = Number of Words / Total development man-month steps
or
Development productivity = Number of Words / man-day
Development cost = Total Words x Unit standard cost
(Unit standard cost = Standard man-day cost / Development productivity)
(Unit standard cost = Standard cost per 1 Word)
the software development cost can be specified more clearly.

And, by the present invention, the direction the enhancement of development productivity shall be able to continue infinitely for containing the following parameters:

1. How to bring 'system development (steps and period)' closer to 'Words' semantic quality condition specifying time';
XV. How to shorten 'Words' semantic quality condition specifying time';
XVI. How to 'simplify' the development infrastructure;
XVII. How to promote the recycle of the specified 'Words' semantic quality condition.

Also, thereafter with establishing a foundation by thoroughly utilizing the present invention, the development productivity shall be able to be further improved through improvements of the TOOL, reorganization of the working departments units, reuse of Screens and Printouts, et al.

Also, according to the present invention, the DB (database) may as well be determined which contains only Words belonging to Screen and Printouts as Words of DB. As a result of this, because the originally 'separate Words' are made to be the 'same Words' by means of makeup of commonalty or regulation, the traditional DB designing work which brought about a variety of bad effects shall be dispelled, including setting up an internal logic derived thereabouts and a word 'classification' to establish the logic, which is unknown to the users, or to set up a process branching logic based on the contents of the classification, etc.

So as to satisfy Self Creation concerned with Homogeneity Vector of Words belonging to Screen and Printouts (that is, a logic synonymous with a concept of 'recollection of memory' or 'awareness'), the DB can be determined instantly if memorized words of Words belonging to the Screen and Printouts, thereby totally canceling the necessity of the setup of the other 'classification'.

Also, in the source code of the program realized by the present invention, no feature parts of each programming language shall enter, so it shall not be affected by changes of a computer and OS. As a result, the 100-percent transplantability is enabled between different machines, different OS et al.

Speaking of the effects by the present invention more concretely, the following are pointed out:

· No need to prepare a program for validity check of data code value and mutual data codes.
· No need to prepare a program for process procedure.
· No need of design work for the creation of program for the external specification.
· Traditional internal programs shall be produced structurally when external programs are executed.
· Approximately 99% of external programs can be produced by mechanical algorithm.
· Scenario Function substitutes the traditional design work.
· No destruction of logic shall occur in programs determined by Scenario Function.
· Scenario Function is applicable to all software.
· The transplantability of software determined by Scenario Function becomes 100%.
· No need to examine or to know work requirement.
· Logic test shall be unnecessary, simply requiring check on output data codes.
· The regulation of database shall be unnecessary.
· The theoretical base of the program codes determination becomes 100%-objective, and the maintenance shall be removed from personal concerns.

These effects have been field-proven through actual works of the construction and the change of integrated information processing systems at a number of corporations by using LYEE concerned with the present invention.

If a viewpoint is focused on the principle of the present invention, the achievements of additional effects can be pointed out.

That is, with this invention, a rule that forms a base of all kinds of existence inclusive of the software world regulates an existence in the form of 'Unit-Link' in which 'the Kuh' and 'the Non-Kuh' is established. If this is applied, for example, to software development, and when words uttered as development requirement are duplicated (warped) into the Consciousness meaning-space via the 'the Kuh' circuit, a program that can realize a concurrent and univocal determination of the subject on why words uttered as development requirement must be the very words. When this program is reduced onto a computer and operated, a scheme can be fixedly produced that enables to fetch the proposition. Additionally, if it is sublimated up to the level of application and technique, it shall perform various effects that could not be attained by any methods to date. Therefore, if the principle and rule concerned with the present invention are correctly grasped and implemented, it may as well be said that a remarkable phenomenon and effect shall materialize with a solid possibility, surpassing the aforementioned effects.

That is, the semantic quality of Consciousness Unit-Link, a univocal existence, in which the β pieces of its constituent Logical Atom break up into $\beta^{\beta}$ pieces and turn into a polysemous entity, is embodied in the Natural meaning-space, and the semantic quality of the Natural meaning-space will turn into a meaning with more polysemy as a result of human's personal recognition, which is oriented similarly by such polysemous semantic quality (A meaning as such is called 'functional meaning' by the present invention).

These take a form of a polysemous structural body of Natural Unit-Link which underwent Coupling. The structural body has been materialized, composed of both data factor (that is, Homogeneity Vector) and logical factor (Duplication Vector). We, humans, and our recognition and awareness, too, exist as a polysemous meaning, so logical factor we produce, that is, a thinking, anxiety et al of ours is inevitably personal, thereby becoming polysemous. Without polysemous, a concept of a functional meaning is not justified, and if a functional meaning is not justified, humans are not to be justified. Humans possess a finite structure composed of six trillion pieces of cells, no clone humans exist in a sense of a functional meaning. In that sense, a polysemous logical factor shall be FALSE (personal), and not TRUE (that is, a correct solution).

A functional product is produced thereabouts, and it may as well be said that we are made to live at ease because of it (that is, we can be satisfied if our ego is fulfilled, speaking from the human's original nature seeking for freedom).

In our human world, however even natural science has not been able to obtain any of the TRUE state (that is, a correct solution) to date. For example, even if an equation that combines the relationship between a requirement desiring to develop a structure with mass and physical properties and a structure of the requirement's result, it produces an error in a strict sense, based on Newtonian mechanics, thereby presenting defects and new phenomenon unexpected. Also, for example, Einstein's relativity as well, did not determinately elucidate the birth of the existence phenomenon of the universe and its future. It is simply because the individual theories established by Newton and Einstein are based on a functional meaning and nothing but the functional meanings are produced based on the FALSE logical factor.

If a way of thinking that establishes a universal functional meaning can be discovered by making the logical factor (that is, Duplication Vector) as zero, we, humankind, may be able to discover a rule accorded in the Providence of Existence (or the Creator) based on this synchronous way of thinking (regrettably at the stage of the present invention, the algorithm presented for software is most part that has been reached to a concrete algorithm and to call existence). The present invention proposes a recognition of a realistic existence of such possibility, and it may manifest effects for opening the door to the possibility of great discoveries in future.

8. Possibility of industrial use

As aforementioned, really a great many dramatic effects for the industry can be attained through the present invention.

For example, the traditional logic created by software engineers, particularly operational input check logic and operational process control logic, shall become needless. In other words, programs of every Word can be univocally determined by 'specifying semantic quality-materializing condition' for every Word, and software development for information processing system can be completed only by 'substituting' the semantic quality-materializing condition' into the already-existing Synchronous Structure. This fact shall bring about dramatic enhancement of the system development productivity of a software.

The operational input check logic and the operational process control logic which satisfy the requirement of those who want software production are autonomously created by executing 'Scenario Function' after it has been reduced onto a computer. Thus, the design work of the part, which has been called the up-stream by the traditional method shall become almost needless.

The Tense Control Vector, as a completely independent program, is what possesses a determinate structure, and is qualified, enough to be called the first and the last one in the software history. Features of such 'independence' are to meddle autonomously and mutually with the components of the whole of software, and the problem involved in software development and maintenance is to be improved from its root.

One of the examples is an effect reducing development steps and development term beyond imagination as well as improving product quality beyond imagination.

Also, by taking a clue of a few terms uttered by those who want software production, the program can be completed only by substituting Word Identifiers concerned the terms into the independent variables of Scenario Function. Only by fulfilling terms, without interpreting their meaning, so as to satisfying a linking relation between the Self and the Given of the Self Creation part concerned with W03 Homogeneity Vector, detailed and consistent content of the requirement of those who want software production can be determined. That is, development and programs can be determined concurrently.

As a result, the development work step adopted traditionally shall change to a large extent from its root. That is, Scenario Function is solved by substituting Word Identifier concerned with terms uttered by those who want software production into the Independent Variable of Scenario Function. During the process of solving it, those who want software production determine conditions to realize Word's semantic quality for every Word. By expressing the every Word's condition and the solved result in a diagram 'Homogeneity Map, it becomes a specification document, and on the other hand, the program is also completed by a simple task of substituting Word Identifier and semantic quality-materializing conditions into the variable part of the Program Template.

That is, the following traditional tasks shall not be required, including the requirement arrangement work, the requirement detailing work, the preparation of program specifications, the internal process logic design et al.

Consequently, it is made possible for those who want software production, to create software by themselves. Then software engineer's duty shall be limited only to creating programs of 'Action Vectors', not inclusive of 'Work Requirement Action Vector'.

Also, according to the present invention, software requirement and program structure are prescribed. Thus, if the Definitive of Screen et al and the Words belonging to it can be specified, anybody can understand software, even if he was not a developer. That is, the entity of all of 1-statements of a huge program shall be visible - such state can be produced. By for this reason, the maintenance can be implemented at ease by anybody, thereby removing maintenance staff of the heavy work load required traditionally.

Also, according to the present invention, all components consisting of software are independent, the integration from the individual system to the unified one and the segmentation from the unified to the individual ones, requires lesser labor and work, thereby enabling a surprising saving of time, which can bring about effective impact on management of business.

Further, by the present invention, the preparation for the system planning can be promptly and proceeded with the management guideline. The reasons for that are as follows: It is not necessary to begin development of internal individual modules after fixing the whole system configuration, which means the coordination of the individual systems and the whole system is not required, thereby surprisingly reducing the development time involved. Such effect extends in multiplicity from the planning stage to the dramatic renovation of the development infrastructure.

Speaking specifically, a system can be built in the unit of Screen as operated by terminal users. W04 Pallet and W02 Pallet are prepared one for each Screen, and data field concerned with Word and Tense Control Vector are prepared in correspondence to Screen's Words. W03 Pallet is prepared one for the system, and in correspondence to all Words of all Screens and all KB (keyboard)s, data field concerned with Word and Tense Control Vector are to be prepared. This is all that is required as a process based on the present invention. Consequently, the system buildup work shall be made greatly easy.

Moreover, those created Tense Control Vector, Action Vector, Pallet Function, Pallet Chain Function et al are realized as codes simply substituted by identifiers as is. Also, even for any software and any Words, the identical structure is used, so they can be used as they are when another system is built, simply by providing a new correspondence between the existing system's identifiers and headers concerned with Words of a new system. Further, for the same reason, when individually built systems are integrated, it may as well simply merge them, not requiring re-arrangement of Words. A huge amount of time spent currently for such involved tasks shall become almost zero instantly.

Also, by the present invention, the modification of system is realized simply by implementing Adding and Changing such media as Screen and Printouts as well as Adding, Changing and Deleting Words (Programs are independent for every word, so no affect is caused to others), so the system modification can be realized matching the speed required for the business improvement involved. Further, in this instance, the format modification of Screen can be realized only by changing Tense Control Vector for every Words to be added or deleted, and the system modification is replaced by the work of adding DB Words as well as adding Screens and Words.

Further, by the present invention, the entity of software assets' shall change greatly. That is, the condition of all kinds of software are regularly determined in advance with the Synchronous Structure, so anybody can understand it by viewing Screen and Words, thereby allowing communication concerned with software conditions only by means of Screen, Printouts and Words belonging thereto, which means not needing any particular knowledge of works involved and information technology.

Because of this, program source code shall lose its qualifications as software assets. This is because once Screen, Printouts and Words belonging thereto that can be viewed by anybody are modified, anybody can create the same program source code. Software assets are replaced, according to the present invention, by such Definitive formats as Screen and Printouts, Homogeneity Map Diagrams, memorandum of semantic quality-materializing conditions et al, and as a result, it can lead to a great reduction and nullification of various costs concerned with the software.

Also, by the present invention, a revolutionary change in the way of estimating development costs, thereby producing profits not affected by the cost. Work steps ranging from designing to system test in the activity process flow are covered by the consistent thinking based on the Homogeneity Map, therefore, the point of view on the productivity is switched from system-creator's side to the user's side, thus causing a significant change in the way of estimating development costs from the traditional cost-orientation to a final product-orientation.

Speaking more specifically, the estimation format can be changed from the cost-orientation (man-month steps) to a final product-orientation (the number of Words). That is, according to the present invention, the structure of software is already known as Scenario Function, so it may as well determine independent variables (Words for a software model and their semantic quality-materializing conditions) of the functions involved and substitute them. So, the productivity scale is totally refreshed, and the traditional scale which was affected by the knowledge and ability of the creator's side represented as 'The development productivity = The number of all steps for development / all man-month steps for development' shall be converted to the scale which is not affected by the creating people, that is, 'The development productivity = The ability of determining Independent variables = The number of Words for a software model / the steps for determining semantic quality-materializing conditions'.

Further, as an effect of its extension, this invention brings about a renovation to the development cost estimate method with more adequacy. That is, by providing the following scale:

Development productivity = Number of Words / Total development man-month steps

or

Development productivity = Number of Words / man-day

Development cost = Total Words x Unit standard cost

(Unit standard cost = Standard man-day cost / Development productivity)

(Unit standard cost = Standard cost per 1 Word) the software development cost can be specified more clearly.

And, by the present invention, the direction the enhancement of development productivity shall be able to continue infinitely for containing the following parameters:

1. How to bring 'system development (steps and period)' closer to 'Words' semantic quality condition specifying time';
2. How to shorten 'Words' semantic quality condition specifying time';
3. How to 'simplify' the development infrastructure;
4. How to promote the recycle of the specified 'Words' semantic quality condition.

Also, thereafter with establishing a foundation by thoroughly applying the present invention, the development productivity shall be able to be further improved through improvements of the TOOL, reorganization of the working departments units, reuse of Screens and Printouts, et al.
Also, according to the present invention, the DB (database) may as well be determined which contains only Words belonging to Screen and Printouts as Words of DB. As a result of this, because the originally 'Words which ought to be separate existence' are made to be the 'same Words' by means of makeup of commonalty or regulation, the traditional DB designing work which brought about a variety of bad effects shall be dispelled, including setting up an internal logic derived thereabouts and a word 'classification' to establish the logic, which is unknown to the users, or to set up a process branching logic based on the contents of the classification, etc. So as to satisfy Self Creation concerned with Homogeneity Vector of Words belonging to Screen and Printouts (that is, a logic synonymous with a concept of 'recollection of memory' or 'awareness'), the DB can be determined instantly if memorized words of Words belonging to the Screen and Also, in the source code of the program realized by the present invention, no feature parts of each programming language shall enter, so it shall not be affected by changes of a computer and OS. As a result, the 100-percent transplantability is enabled between different machines, different OS et al.
Speaking of the effects by the present invention more concretely, the following are pointed out:

- No need to prepare a program for validity check of data code value and mutual data codes.
- No need to prepare a program for process procedure.
- No need of design work for the creation of program for the external specification.
- Traditional internal programs shall be produced structurally when external programs are executed.
- Approximately 99% of external programs can be produced by mechanical algorithm.
- Scenario Function substitutes the traditional design work.
- No destruction of logic shall occur in programs determined by Scenario Function.
- Scenario Function is applicable to all software.
- The transplantability of software determined by Scenario Function becomes 100%.
- No need to examine or to know work requirement.
- Logic test shall be unnecessary, simply requiring check on output figures.
- The regulation of database shall be unnecessary.
- The theoretical base of the program codes determination becomes 100%-objective, and the maintenance shall be removed from personal concerns.

These effects have been field-proven through actual works of the construction and the change of integrated information processing systems at a number of corporations by using LYEE concerned with the present invention.

## Claims

**1.** A software determination method, the method using a Template, the Template comprising:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively.

**2.** The software determination method as set forth in Claim 1,
wherein the media is at least either Screen, Printouts or File.

**3.** The software determination method as set forth in Claim 1,
wherein a unit of establishing semantic quality can be regarded as only words belonging to the media in the real sphere of a computer.

**4.** The software determination method as set forth in Claim 1,
wherein the semantic quality is univocally obtained by substituting an identifier of the media into an independent variable of a Scenario Function, the Scenario Function being a functional expression of a mechanism to induce from a data code the unique semantic-quality which assumes on the data code.

**5.** The software determination method as set forth in Claim 1,
wherein the structures of the first, the second and the third criterion programs are created based on a paradigm which simulates on a computer a 'meaning-recognition structure' of recognizing a meaning from the semantic quality.

**6.** The software determination method as set forth in Claim 1,
wherein the structures of the first, the second and the third criterion programs are identified by a Scenario Function, the Scenario Function being a functional expression of a mechanism to induce from a data code the univocal semantic quality which assumes on the data code.

**7.** The software determination method as set forth in Claim 6,
wherein under this mechanism, semantic quality which has materialized in a Consciousness meaning-space existing in depths of consciousness is inherited linearly and univocally into Definite meaning-space, Event meaning-space and Equivalence meaning-space and what is recognized as a meaning is a difference between a Coupling formed by this inherited semantic quality in a Natural meaning-space and another Coupling formed by the other semantic quality.

**8.** The software determination method as set forth in Claim 7,
wherein when L2 (k,i) represents first Tense Control Vector (WO2 Homogeneity Vector) which univocally induces semantic quality of a word plotted on WO2 Pallet simulating, on a computer, the Definite meaning-space; Y3 (k,i) represents second Tense Control Vector (the former; WO3 Duplication Vector, the latter: WO3 Homogeneity Vector) which univocally induces semantic quality of a word plotted on WO3 Pallet simulating, on a computer, the Event meaning-space; Y4 (k,i) represents third Tense Control Vector (the former: WO4 Duplication Vector, the latter; WO4 Homogeneity Vector) which univocally induces semantic quality of a word plotted on WO4 Pallet simulating, on a computer, the Equivalence meaning-space; 'Φp{,}k' represents Pallet Function which gathers, regardless of their orders, the Tense Control Vectors, the Vectors being components enclosed by '{' and '}', for the same times as denoted by k or for all the times as represented by the system in case 'k' is lacking; k represents an identifier of the media; i represents an identifier of a word regarded as a unit for forming the semantic quality; Φ0( + + + ) represents Pallet Chain Function which links the pallets, which are components inside the (), and are processes to linearly induce semantic quality via the Definite meaning-space, the Event meaning-space and the Equivalence meaning-space, a Scenario Function is expressed by the following:

$$T0 = \Phi 0 \, (+ \{\Phi p \{ \quad , L2\,(k,i)\}\}k$$

$$+ \Phi p \{Y3\,(k,i)\, , L3\,(k,i)\}$$

$$+ \{\Phi p \{Y4\,(k,i)\, , L4\,(k,i)\}\}\, k).$$

**9.** The software determination method as set forth in Claim 8,
wherein the Tense Control Vector (L2 (k,i): WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**10.** The software determination method as set forth in Claim 8,
wherein the Tense Control Vector (Y3 (k,i): WO3 Duplication Vector) expressed by Y3 (k,i) on WO3 Pallet, which has simulated the Event meaning -space on a computer, comprises:

a first step to confirm whether a data code exists in a data field to be identified by the i belonging to the WO2 Pallet of media identified by the k; and
a second step to duplicate, when the data code is present in the data field in the first step, the data code into a data field identified by the i belonging to the self Pallet of media identified by k.

**11.** The software determination method as set forth in Claim 8,
Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**12.** The software determination method as set forth in Claim 8,
Wherein the Tense Control Vector (Y4 (k,i): WO4 Duplication Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**13.** The software determination method as set forth in Claim 8,
wherein the Tense Control Vector (L4(k,i): WO4 Homogeneity Vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and

a third step to examine, when the concrete editing is refused in the second step, whether the attribute check of WO2 Homogeneity Vector is Refusal or whether the Self Creation of WO3 Homogeneity Vector is Refusal, and to determine the cause of the Refusal and implement the concrete editing of the cause of Refusal.

**14.** The software determination method as set forth in Claim 7,
wherein the L2 (k,i) represents Tense Control Vector (WO2 Homogeneity Vector) which univocally induces semantic quality of WO2 Pallet simulating the Definite meaning-space on a computer; Y3 (k,i) and L3 (k,i) represent Tense Control Vector (the former: WO3 Duplication Vector, the latter: WO3 Homogeneity Vector) which univocally induces semantic quality of WO3 Pallet simulating the Event meaning-space on a computer; Y4(k,i) and L4 (k,i) represent Tense Control Vector (the former: WO4 Duplication Vector, the latter: WO4 Homogeneity Vector) which univocally induces semantic quality of WO4 Pallet simulating the Equivalence meaning-space on a computer; 'Φ p{,}k' represents Pallet Function which collects, for the same amount as k or for all the system in case there is no k, Tense Control Vectors which are components enclosed by '{' and '}', while that collection having no condition of their order; k represents an identifier of the media; i represents an identifier of a word regarded as a unit for forming the semantic quality ; Φ0(+ + + ) represents Pallet Chain Function which links the Pallets, which are components inside the (), which is a process to linearly induce semantic quality via Definite meaning-space, Event meaning-space and Equivalence meaning-space; T1(f) represents Scenario Function in a case where the kind of the media includes and file or Printouts as well; and P2(j), P3(j) and P4(j) respectively represent Action Vectors with a complementary logical structure when simulating on a computer the mechanism in the WO2 Pallet, the WO3 Pallet and the WO4 Pallet, respectively, then, the Scenario Function is expressed by the following:

$$T0 = \Phi 0 \ (+ \{\Phi p\{ \quad , L2\ (k,i),\ P2\ (j)\}\ \}k$$
$$+ \Phi p\ \{Y3\ (k,i)\ ,\ L3\ (k,i)\ ,\ P3\ (j),$$
$$T1(f)\}$$
$$+ \{\Phi p\ \{Y4\ (k,i)\ ,\ L4\ (k,i)\ ,\ P4\ (j)\}\}\ k)$$

$$T1\ (f) = \Phi 1\ (\{\Phi p\ (rf,2)\ \{ \quad , L2\ (r,i),\ P2\ (r,j),\ P2$$
$$(j)\}\}\ r$$
$$+ (\{\Phi p(rf,3)\ \{Y3\ (r.i),\ L3\ (r,i)\ ,\ L3\ (f,i)\ ,\ P3\ (j)\}\}$$
$$+ \{\Phi p(fr,4)\ \{Y3\ (f,i),\ L4\ (f,j),\ P4\ (f,j)\ ,\ P4\ (j)\ \}\}$$
$$f)$$

**15.** The software determination method as set forth in Claim 14,
wherein the Tense Control Vector (L2 (k,i): WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**16.** The software determination method as set forth in Claim 14,
wherein the Tense Control Vector (Y3 (k,i): WO3 Duplication Vector) expressed by Y3 (k,i) on WO3 Pallet, which has simulated the Event meaning-space on a computer, comprises:

a first step to confirm whether a data code exists in a data field to be identified by the i belonging to the WO2 Pallet of media identified by the k; and

a second step to duplicate, when the data code is present in the data field in the first step, the data code into a data field identified by the i belonging to the self Pallet of media identified by k.

**17.** The software determination method as set forth in Claim 14,
Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**18.** The software determination method as set forth in Claim 14,
Wherein the Tense Control Vector (Y4 (k,i): WO4 Duplication Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**19.** The software determination as set forth in Claim 14,
wherein the Tense Control Vector (L4(k,i): WO4 Homogeneity Vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and
a third step to examine, when the concrete editing is refused in the second step, whether the attribute check of WO2 Homogeneity Vector is Refusal or whether the Self Creation of WO3 Homogeneity Vector is Refusal, and to determine the cause of the Refusal and implement the concrete editing of the cause of Refusal.

**20.** The software determination as set forth in Claim 1,
wherein the first criterion program has a logical structure which enables:

(1) To duplicate the semantic quality of the word existing in the first domain in the multiple domains as a semantic quality of a word existing in the second domain in the multiple domains; and
(2) To induce semantic quality either by substituting or by calculating from a semantic quality of a word in a domain other than the first domain.

**21.** The software determination method as set forth in Claim 1,
Wherein, based on a mechanism in which semantic quality formed in Consciousness meaning-space in depths of consciousness is linearly and univocally inherited in Definite meaning-space, Event meaning-space and Equivalence meaning-space, and this inherited semantic quality Coupling in Natural meaning-space is recognized as a meaning, the Domain is either one of the followings:

WO2 Pallet which has simulated the Definite meaning-space on a computer;
WO3 Pallet which has simulated the Event meaning-space on a computer; or
WO4 Pallet which has simulated the Equivalence meaning-space on a computer.

**22.** The software determination method as set forth in Claim 1,
wherein the second criterion program put together, regardless of the processing order by words, Tense Control Vectors of a same kind, per each domain in the multiple domains.

**23.** The software determination method as set forth in Claim 8,
wherein the third criterion program comprises:

A 1st step to determine send information to be displayed on Screen in a system;
A 2nd step to examine a data code in the data field in which an identifier of Pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;
A 9th step to activate WO3 Pallet or Pallet Chain Function of T1 when needed; and
A 10th step to repeat from the 1st step to the 9th step incessantly until the system is closed.

**24.** The software determination method as set forth in Claim 14,
wherein the third criterion program comprises:

A 1st step to determine send information to be displayed on Screen in a system;
A 2nd step to examine a data code in the data field in which an identifier of pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;
A 9th step to activate WO3 Pallet when needed;
A 10th step to repeat from the 1st step to the 9th step incessantly until the system is closed.

**25.** A software usage method, the software comprising:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively; and
wherein the software usage method actualizes a required function via the software by means of operating the univocally determined software so as to maintain Synchronous Structure by a unit of the semantic quality.

**26.** The software usage method as set forth in Claim 25,
wherein the media is at least either Screen, Printouts or File.

**27.** The software usage method as set forth in Claim 25,
wherein a unit of establishing semantic quality can be regarded as only words belonging to the media in the real sphere of a computer.

**28.** The software usage method as set forth in Claim 25,
wherein the semantic quality is univocally obtained by substituting an identifier of the media into an independent variable of a Scenario Function, the Scenario Function being a functional expression of a mechanism to induce from a data code the unique semantic-quality which assumes on the data code.

**29.** The software usage method as set forth in Claim 25,
wherein the structures of the first, the second and the third criterion programs are created based on a paradigm which simulates on a computer a 'meaning-recognition structure' of recognizing a meaning from the semantic quality.

**30.** The software usage method as set forth in Claim 25,
wherein the structures of the first, the second and the third criterion programs are identified by a Scenario Function, the Scenario Function being a functional expression of a mechanism to induce from a data code the univocal semantic quality which assumes on the data code.

**31.** The software usage method as set forth in Claim 30,
wherein under this mechanism, semantic quality which has materialized in a Consciousness meaning-space existing in depths of consciousness is inherited linearly and univocally into Definite meaning-space, Event meaning-space and Equivalence meaning-space and what is recognized as a meaning is a difference between a Coupling formed by this inherited semantic quality in a Natural meaning-space and another Coupling formed by the other semantic quality.

**32.** The software usage method as set forth in Claim 31,
wherein when L2 (k,i) represents first Tense Control Vector (WO2 Homogeneity Vector) which univocally induces semantic quality of a word plotted on WO2 Pallet simulating, on a computer, the Definite meaning-space; Y3 (k,i) represents second Tense Control Vector (the former; WO3 Duplication Vector, the latter: WO3 Homogeneity Vector) which univocally induces semantic quality of a word plotted on WO3 Pallet simulating, on a computer, the Event meaning-space; Y4 (k,i) represents third Tense Control Vector (the former: WO4 Duplication Vector, the latter; WO4 Homogeneity Vector) which univocally induces semantic quality of a word plotted on WO4 Pallet simulating, on a computer, the Equivalence meaning-space; 'Φp{,}k' represents Pallet Function which gathers, regardless of their orders, the Tense Control Vectors, the Vectors being components enclosed by '{' and '}', for the same times as denoted by k or for all the times as represented by the system in case 'k' is lacking; k represents an identifier of the media; i represents an identifier of a word regarded as a unit for forming the semantic quality; Φ0( + + +) represents Pallet Chain Function which links the pallets, which are components inside the (), and are processes to linearly induce semantic quality via the Definite meaning-space, the Event meaning-space and the Equivalence meaning-space, a Scenario Function is expressed by the following:

$$T0 = \Phi 0(+ \{\Phi p \{\qquad , L2(k,i)\}\}k$$

$$+ \Phi p \{Y3 (k,i) , L3 (k,i)\}$$

$$+ \{\Phi p \{Y4 (k,i) , L4 (k,i)\}\} k).$$

**33.** The software usage method as set forth in Claim 32,
wherein the Tense Control Vector (L2 (k,i): WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**34.** The software usage method as set forth in Claim 32,
wherein the Tense Control Vector (Y3 (k,i): WO3 Duplication Vector) expressed by Y3 (k,i) on WO3 Pallet, which has simulated the Event meaning -space on a computer, comprises:

a first step to confirm whether a data code exists in a data field to be identified by the i belonging to the WO2 Pallet of media identified by the k; and
a second step to duplicate, when the data code is present in the data field in the first step, the data code into a data field identified by the i belonging to the self Pallet of media identified by k.

**35.** The software usage method as set forth in Claim 32,
Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**36.** The software usage method as set forth in Claim 32,
Wherein the Tense Control Vector (Y4 (k,i): WO4 Duplication Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**37.** The software usage method as set forth in Claim 32,
wherein the Tense Control Vector (L4(k,i): WO4 Homogeneity Vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and
a third step to examine, when the concrete editing is refused in the second step, whether the attribute check of WO2 Homogeneity Vector is Refusal or whether the Self Creation of WO3 Homogeneity Vector is Refusal, and to determine the cause of the Refusal and implement the concrete editing of the cause of Refusal.

**38.** The software usage method as set forth in Claim 31,
wherein the L2 (k,i) represents Tense Control Vector (WO2 Homogeneity Vector) which univocally induces semantic quality of WO2 Pallet simulating the Definite meaning-space on a computer; Y3 (k,i) and L3 (k,i) represent Tense Control Vector (the former: WO3 Duplication Vector, the latter: WO3 Homogeneity Vector) which univocally induces semantic quality of WO3 Pallet simulating the Event meaning-space on a computer; Y4(k,i) and L4 (k,i) represent Tense Control Vector (the former: WO4 Duplication Vector, the latter: WO4 Homogeneity Vector) which univocally induces semantic quality of WO4 Pallet simulating the Equivalence meaning-space on a computer; ' Φ p{,}k' represents Pallet Function which collects, for the same amount as k or for all the system in case there is no k, Tense Control Vectors which are components enclosed by '{' and '}', while that collection having no condition of their order; k represents an identifier of the media; i represents an identifier of a word regarded as a unit for forming the semantic quality ; Φ 0(+ + + ) represents Pallet Chain Function which links the Pallets, which are components inside the (), which is a process to linearly induce semantic quality via Definite meaning-space, Event meaning-space and Equivalence meaning-space; T1(f) represents Scenario Function in a case where the kind of the media includes and file or Printouts as well; and P2(j), P3(j) and P4(j) respectively represent Action Vectors with a complementary logical structure when simulating on a computer the mechanism in the WO2 Pallet, the WO3 Pallet and the WO4 Pallet, respectively, then, the Scenario Function is expressed by the following:

T0 = Φ0 ( + {Φp{ , L2 (k,i) , P2 (j)} }k

+ Φp{Y3 (k,i) , L3 (k,i) , P3 (j),

T1(f)}

+ {Φp{Y4 (k,i) , L4 (k,i) , P4 (j)}} k)

T1 (f) = Φ1 ({Φp(rf,2) { , L2 (r,i), P2 (r,j), P2

(j)}} r

+ ({Φp (rf,3) {Y3 (r.i), L3 (r,i) , L3 (f,i) , P3 (j)}}

+ {Φp (fr,4) {Y3 (f,i), L4 (f,j) , P4 (f,j), P4 (j) }}

f)

**39.** The software usage method as set forth in Claim 38,
wherein the Tense Control Vector (L2 (k,i): WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**40.** The software usage method as set forth in Claim 38,
wherein the Tense Control Vector (Y3 (k,i): WO3 Duplication Vector) expressed by Y3 (k,i) on WO3 Pallet, which has simulated the Event meaning-space on a computer, comprises:

a first step to confirm whether a data code exists in a data field to be identified by the i belonging to the WO2 Pallet of media identified by the k; and
a second step to duplicate, when the data code is present in the data field in the first step, the data code into a data field identified by the i belonging to the self Pallet of media identified by k.

**41.** The software usage method as set forth in Claim 38,
Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**42.** The software usage method as set forth in Claim 38,
Wherein the Tense Control Vector (Y4 (k,i): WO4 Duplication Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**43.** The software usage method as set forth in Claim 38,
wherein the Tense Control Vector (L4(k,i): WO4 Homogeneity Vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and
a third step to examine, when the concrete editing is refused in the second step, whether the attribute check of WO2 Homogeneity Vector is Refusal or whether the Self Creation of WO3 Homogeneity Vector is Refusal, and to determine the cause of the Refusal and implement the concrete editing of the cause of Refusal.

**44.** The software usage method as set forth in Claim 25,
wherein the first criterion program has a logical structure which enables:

(1) To duplicate the semantic quality of the word existing in the first domain in the multiple domains as a semantic quality of a word existing in the second domain in the multiple domains; and
(2) To induce semantic quality either by substituting or by calculating from a semantic quality of a word in a domain other than the first domain.

**45.** The software usage method as set forth in Claim 25,
Wherein, based on a mechanism in which semantic quality formed in Consciousness meaning-space in depths of consciousness is linearly and univocally inherited in Definite meaning-space, Event meaning-space and Equivalence meaning-space, and this inherited semantic quality Coupling in Natural meaning-space is recognized as a meaning, the Domain is either one of the followings:

WO2 Pallet which has simulated the Definite meaning-space on a computer;
WO3 Pallet which has simulated the Event meaning-space on a computer; or
WO4 Pallet which has simulated the Equivalence meaning-space on a computer.

**46.** The software usage method as set forth in Claim 25,
wherein the second criterion program put together, regardless of the processing order by words, Tense Control Vectors of a same kind, per each domain in the multiple domains.

**47.** The software usage method as set forth in Claim 32,
wherein the third criterion program comprises:

A 1st step to determine send information to be displayed on Screen in a system;
A 2nd step to examine a data code in the data field in which an identifier of Pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;
A 9th step to activate WO3 Pallet or Pallet Chain Function of T1 when needed; and
A 10th step to repeat from the 1st step to the 9th step incessantly until the system is closed.

**48.** The software usage method as set forth in Claim 38,
wherein the third criterion program comprises:

A 1st step to determine send information to be displayed on Screen in a system;
A 2nd step to examine a data code in the data field in which an identifier of pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;
A 9th step to activate WO3 Pallet when needed;
A 10th step to repeat from the 1st step to the 9th step incessantly until the system is closed.

**49.** The recording medium on which a Template program is recorded, the Template program comprising:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively.

**50.** The recording medium as set forth in Claim 49,
wherein the media is at least either Screen, Printouts or File.

**51.** The recording medium as set forth in Claim 49,
wherein a unit of establishing semantic quality can be regarded as only words belonging to the media in the real sphere of a computer.

**52.** The recording medium as set forth in Claim 49,
wherein the semantic quality is univocally obtained by substituting an identifier of the media into an independent variable of a Scenario Function, the Scenario Function being a functional expression of a mechanism to induce from a data code the unique semantic-quality which assumes on the data code.

**53.** The recording medium as set forth in Claim 49,
wherein the structures of the first, the second and the third criterion programs are created based on a paradigm which simulates on a computer a 'meaning-recognition structure' of recognizing a meaning from the semantic quality.

**54.** The recording medium as set forth in Claim 49,
wherein the structures of the first, the second and the third criterion programs are identified by a Scenario Function, the Scenario Function being a functional expression of a mechanism to induce from a data code the univocal semantic quality which assumes on the data code.

**55.** The recording medium as set forth in Claim 54,
wherein under this mechanism, semantic quality which has materialized in a Consciousness meaning-space existing in depths of consciousness is inherited linearly and univocally into Definite meaning-space, Event meaning-space and Equivalence meaning-space and what is recognized as a meaning is a difference between a Coupling formed by this inherited semantic quality in a Natural meaning-space and another Coupling formed by the other semantic quality.

**56.** The recording medium as set forth in Claim 55,
wherein when L2 (k,i) represents first Tense Control Vector (WO2 Homogeneity Vector) which univocally induces semantic quality of a word plotted on WO2 Pallet simulating, on a computer, the Definite meaning-space; Y3 (k,i) represents second Tense Control Vector (the former; WO3 Duplication Vector, the latter: WO3 Homogeneity Vector) which univocally induces semantic quality of a word plotted on WO3 Pallet simulating, on a computer, the Event meaning-space; Y4 (k,i) represents third Tense Control Vector (the former: WO4 Duplication Vector, the latter; WO4 Homogeneity Vector) which univocally induces semantic quality of a word plotted on WO4 Pallet simulating, on a computer, the Equivalence meaning-space; 'Φp{,}k' represents Pallet Function which gathers, regardless of their orders, the Tense Control Vectors, the Vectors being components enclosed by '{' and '}', for the same times as denoted by k or for all the times as represented by the system in case 'k' is lacking; k represents an identifier of the media; i represents an identifier of a word regarded as a unit for forming the semantic quality; Φ0( + + +) represents Pallet Chain Function which links the pallets, which are components inside the (), and are processes to linearly induce semantic quality via the Definite meaning-space, the Event meaning-space and the Equivalence meaning-space, a Scenario Function is expressed by the following:

$$T0 = \Phi 0 (+ \{\Phi p \{ \quad , L2 (k,i)\} \}k$$

$$+ \Phi p \{Y3 (k,i) , L3 (k,i)\}$$

$$+ \{\Phi p \{Y4 (k, i), L4 (k, i)\}\} k).$$

**57.** The recording medium as set forth in Claim 56,
wherein the Tense Control Vector (L2 (k,i): WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**58.** The recording medium as set forth in Claim 56,
wherein the Tense Control Vector (Y3 (k,i): WO3 Duplication Vector) expressed by Y3 (k,i) on WO3 Pallet, which has simulated the Event meaning -space on a computer, comprises:

a first step to confirm whether a data code exists in a data field to be identified by the i belonging to the WO2 Pallet of media identified by the k; and
a second step to duplicate, when the data code is present in the data field in the first step, the data code into a data field identified by the i belonging to the self Pallet of media identified by k.

**59.** The recording medium as set forth in Claim 56,
Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**60.** The recording medium as set forth in Claim 56,
Wherein the Tense Control Vector (Y4 (k,i): WO4 Duplication Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**61.** The recording medium as set forth in Claim 56,
wherein the Tense Control Vector (L4(k,i): WO4 Homogeneity Vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and
a third step to examine, when the concrete editing is refused in the second step, whether the attribute check of WO2 Homogeneity Vector is Refusal or whether the Self Creation of WO3 Homogeneity Vector is Refusal, and to determine the cause of the Refusal and implement the concrete editing of the cause of Refusal.

**62.** The recording medium as set forth in Claim 55,
wherein the L2 (k,i) represents Tense Control Vector (WO2 Homogeneity Vector) which univocally induces semantic quality of WO2 Pallet simulating the Definite meaning-space on a computer; Y3 (k,i) and L3 (k,i) represent Tense Control Vector (the former: WO3 Duplication Vector, the latter: WO3 Homogeneity Vector) which univocally induces semantic quality of WO3 Pallet simulating the Event meaning-space on a computer; Y4(k,i) and L4 (k,i) represent Tense Control Vector (the former: WO4 Duplication Vector, the latter: WO4 Homogeneity Vector) which univocally induces semantic quality of WO4 Pallet simulating the Equivalence meaning-space on a computer; 'Φ p{,}k' represents Pallet Function which collects, for the same amount as k or for all the system in case there is no k, Tense Control Vectors which are components enclosed by '{' and '}', while that collection having no condition of their order; k represents an identifier of the media; i represents an identifier of a word regarded as a unit for forming the semantic quality ; Φ 0(+ + + ) represents Pallet Chain Function which links the Pallets, which are components inside the (), which is a process to linearly induce semantic quality via Definite meaning-space, Event meaning-space and Equivalence meaning space; T1(f) represents Scenario Function in a case where the kind of the media includes and file or Printouts as well; and P2(j), P3(j) and P4(j) respectively represent Action Vectors with a complementary logical structure when simulating on a computer the mechanism in the WO2 Pallet, the WO3 Pallet and the WO4 Pallet, respectively, then, the Scenario Function is expressed by the following:

$$T0 = \Phi 0\ (+\ \{\Phi p\{\qquad, L2\ (k,i),\ P2\ (j)\}\ \}k$$

$$+\ \Phi p\ \{Y3\ (k,i)\ ,\ L3\ (k,i)\ ,\ P3\ (j),$$

$$T1(f)\}$$

$$+\ \{\Phi p\ \{Y4\ (k,i)\ ,\ L4\ (k,i)\ ,\ P4\ (j)\}\}\ k)$$

$$T1(f) = \Phi 1\ (\{\Phi p\ (rf,2)\ \{\qquad, L2\ (r,i),\ P2\ (r,j),\ P2$$

$$(j)\}\}\ r$$

$$+\ (\{\Phi p\ (rf,3)\ \{Y3\ (r.i)\ ,\ L3\ (r,i)\ ,\ L3\ (f,i)\ ,\ P3\ (j)\}\}$$

$$+\ \{\Phi\ p\ (fr,\ 4)\ \{Y3\ (f,\ i),\ L4\ (f,\ j),\ P4\ (f,\ j)\ ,\ P4$$

$$(j)\ \}\}\ f\ )$$

**63.** The recording medium as set forth in Claim 62,
wherein the Tense Control Vector (L2 (k,i): WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**64.** The recording medium as set forth in Claim 62,
wherein the Tense Control Vector (Y3 (k,i): WO3 Duplication Vector) expressed by Y3 (k,i) on WO3 Pallet, which has simulated the Event meaning-space on a computer, comprises:

a first step to confirm whether a data code exists in a data field to be identified by the i belonging to the WO2 Pallet of media identified by the k; and
a second step to duplicate, when the data code is present in the data field in the first step, the data code into a data field identified by the i belonging to the self Pallet of media identified by k.

**65.** t he recording medium as set forth in Claim 62,
Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**66.** The recording medium as set forth in Claim 62,
Wherein the Tense Control Vector (Y4 (k,i): WO4 Duplication Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**67.** The recording medium as set forth in Claim 62,
wherein the Tense Control Vector (L4(k,i): WO4 Homogeneity Vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and
a third step to examine, when the concrete editing is refused in the second step, whether the attribute check of WO2 Homogeneity Vector is Refusal or whether the Self Creation of W03 Homogeneity Vector is Refusal, and to determine the cause of the Refusal and implement the concrete editing of the cause of Refusal.

**68.** The recording medium as set forth in Claim 49,
wherein the first criterion program has a logical structure which enables:

(1) To duplicate the semantic quality of the word existing in the first domain in the multiple domains as a semantic quality of a word existing in the second domain in the multiple domains; and
(2) To induce semantic quality either by substituting or by calculating from a semantic quality of a word in a domain other than the first domain.

**69.** The recording medium as set forth in Claim 49,
Wherein, based on a mechanism in which semantic quality formed in Consciousness meaning-space in depths of consciousness is linearly and univocally inherited in Definite meaning-space, Event meaning-space and Equivalence meaning-space, and this inherited semantic quality Coupling in Natural meaning-space is recognized as a meaning, the Domain is either one of the followings:

WO2 Pallet which has simulated the Definite meaning-space on a computer;
WO3 Pallet which has simulated the Event meaning-space on a computer; or
WO4 Pallet which has simulated the Equivalence meaning-space on a computer.

**70.** The recording medium as set forth in Claim 49,
wherein the second criterion program put together, regardless of the processing order by words, Tense Control Vectors of a same kind, per each domain in the multiple domains.

**71.** The recording medium as set forth in Claim 56,
wherein the third criterion program comprises:

A 1st step to determine send information to be displayed on Screen in a system;
A 2nd step to examine a data code in the data field in which an identifier of Pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;
A 9th step to activate WO3 Pallet or Pallet Chain Function of T1 when needed; and
A 10th step to repeat from the 1st step to the 9th step incessantly until the system is closed.

**72.** The recording medium as set forth in Claim 62,
wherein the third criterion program comprises:

A 1st step to determine send information to be displayed on Screen in a system;
A 2nd step to examine a data code in the data field in which an identifier of pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;
A 9th step to activate WO3 Pallet when needed;
A 10th step to repeat from the 1st step to the 9th step incessantly until the system is closed.

**73.** A processing apparatus for determining a software by use of a Template program, the Template program comprising:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively.

**74.** The processing apparatus set forth in Claim 73,
wherein the media is at least either Screen, Printouts or File

**75.** The processing apparatus set forth in Claim 73,
wherein a unit of establishing semantic quality can be regarded as only words belonging to the media in the real sphere of a computer.

**76.** The processing apparatus set forth in Claim 73,
wherein the semantic quality is univocally obtained by substituting an identifier of the media into an independent variable of a Scenario Function, the Scenario Function being a functional expression of a mechanism to induce from a data code the unique semantic-quality which assumes on the data code.

**77.** The processing apparatus set forth in Claim 73,
wherein the structures of the first, the second and the third criterion programs are created based on a paradigm which simulates on a computer a 'meaning-recognition structure' of recognizing a meaning from the semantic quality.

**78.** The processing apparatus set forth in Claim 73,
wherein the structures of the first, the second and the third criterion programs are identified by a Scenario Function, the Scenario Function being a functional expression of a mechanism to induce from a data code the univocal semantic quality which assumes on the data code.

**79.** The processing apparatus set forth in Claim 78,
wherein under this mechanism, semantic quality which has materialized in a Consciousness meaning-space existing in depths of consciousness is inherited linearly and univocally into Definite meaning-space, Event meaning-space and Equivalence meaning-space and what is recognized as a meaning is a difference between a Coupling formed by this inherited semantic quality in a Natural meaning-space and another Coupling formed by the other semantic quality.

**80.** The processing apparatus set forth in Claim 79,
wherein when L2 (k,i) represents first Tense Control Vector (WO2 Homogeneity Vector) which univocally induces semantic quality of a word plotted on WO2 Pallet simulating, on a computer, the Definite meaning-space; Y3 (k,i) represents second Tense Control Vector (the former; WO3 Duplication Vector, the latter: WO3 Homogeneity Vector) which univocally induces semantic quality of a word plotted on WO3 Pallet simulating, on a computer, the Event meaning-space; Y4 (k,i) represents third Tense Control Vector (the former: WO4 Duplication Vector, the latter; WO4 Homogeneity Vector) which univocally induces semantic quality of a word plotted on WO4 Pallet simulating, on a computer, the Equivalence meaning-space; 'Φp{,}k' represents Pallet Function which gathers, regardless of their orders, the Tense Control Vectors, the Vectors being components enclosed by '{' and '}', for the same times as denoted by k or for all the times as represented by the system in case 'k' is lacking; k represents an identifier of the media; i represents an identifier of a word regarded as a unit for forming the semantic quality; Φ0( + + +) represents Pallet Chain Function which links the pallets, which are components inside the (), and are processes to linearly induce semantic quality via the Definite meaning-space, the Event meaning-space and the Equivalence meaning-space, a Scenario Function is expressed by the following:

$$T0 = \Phi 0 (+ \{\Phi p \{\qquad , L2(k,i)\}\}k$$

$$+ \Phi p \{Y3 (k,i) , L3 (k,i)\}$$

$$+ \{\Phi p \{Y4 (k,i), L4 (k,i)\}\} k).$$

**81.** The processing apparatus set forth in Claim 80,
wherein the Tense Control Vector (L2 (k,i): WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**82.** The processing apparatus set forth in Claim 80,
wherein the Tense Control Vector (Y3 (k,i): WO3 Duplication Vector) expressed by Y3 (k,i) on WO3 Pallet, which has simulated the Event meaning -space on a computer, comprises:

a first step to confirm whether a data code exists in a data field to be identified by the i belonging to the WO2 Pallet of media identified by the k; and
a second step to duplicate, when the data code is present in the data field in the first step, the data code into a data field identified by the i belonging to the self Pallet of media identified by k.

**83.** The Processing apparatus as set for the in Claim 80,

Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**84.** The processing apparatus as set forth in Claim 80,
Wherein the Tense Control Vector (Y4 (k,i): WO4 Duplication Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**85.** The processing apparatus as set forth in Claim 80,
wherein the Tense Control Vector (L4(k,i): WO4 Homogeneity Vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and
a third step to examine, when the concrete editing is refused in the second step, whether the attribute check of WO2 Homogeneity Vector is Refusal or whether the Self Creation of WO3 Homogeneity Vector is Refusal, and to determine the cause of the Refusal and implement the concrete editing of the cause of Refusal.

**86.** The processing apparatus as set forth in Claim 79,
wherein the L2 (k,i) represents Tense Control Vector (WO2 Homogeneity Vector) which univocally induces semantic quality of WO2 Pallet simulating the Definite meaning-space on a computer; Y3 (k,i) and L3 (k,i) represent Tense Control Vector (the former: WO3 Duplication Vector, the latter: WO3 Homogeneity Vector) which univocally induces semantic quality of WO3 Pallet simulating the Event meaning-space on a computer; Y4(k,i) and L4 (k,i) represent Tense Control Vector (the former: WO4 Duplication Vector, the latter: WO4 Homogeneity Vector) which univocally induces semantic quality of WO4 Pallet simulating the Equivalence meaning-space on a computer; ' Φ p{,}k' represents Pallet Function which collects, for the same amount as k or for all the system in case there is no k, Tense Control Vectors which are components enclosed by '{' and '}', while that collection having no condition of their order; k represents an identifier of the media; i represents an identifier of a word regarded as a unit for forming the semantic quality ; Φ 0(+ + + ) represents Pallet Chain Function which links the Pallets, which are components inside the (), which is a process to linearly induce semantic quality via Definite meaning-space, Event meaning-space and Equivalence meaning-space; T1(f) represents Scenario Function in a case where the kind of the media includes and file or Printouts as well; and P2(j), P3(j) and P4(j) respectively represent Action Vectors with a complementary logical structure when simulating on a computer the mechanism in the WO2 Pallet, the WO3 Pallet and the WO4 Pallet, respectively, then, the Scenario Function is expressed by the following:

T0 = Φ0 (+ {Φp { , L2(k,i), P2 (j)} }k

+ Φp {Y3 (k,i) , L3 (k,i) , P3 (j),

T1(f)}

+ {Φp {Y4 (k,i) , L4 (k,i) , P4 (j)}} k)

T1 (f) = Φ1 ({Φp (rf,2) { , L2 (r,i), P2 (r,j), P2

(j)}} r

+ ({Φp (rf,3) {Y3 (r.i) , L3 (r,i) , L3 (f,i) , P3 (j)}}

+ {Φp (fr, 4) {Y3 (f, i), L4 (f, j) , P4 (f, j) , P4

(j) }} f )

**87.** The processing apparatus as set forth in Claim 86,
wherein the Tense Control Vector (L2 (k,i): WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**88.** The processing apparatus as set forth in Claim 86,
wherein the Tense Control Vector (Y3 (k,i): WO3 Duplication Vector) expressed by Y3 (k,i) on WO3 Pallet, which has simulated the Event meaning-space on a computer, comprises:

a first step to confirm whether a data code exists in a data field to be identified by the i belonging to the WO2 Pallet of media identified by the k; and
a second step to duplicate, when the data code is present in the data field in the first step, the data code into a data field identified by the i belonging to the self Pallet of media identified by k.

**89.** The processing apparatus as set forth in Claim 86,
Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**90.** The processing apparatus as set forth in Claim 86,

Wherein the Tense Control Vector (Y4 (k,i): WO4 Duplication Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**91.** The processing apparatus as set forth in Claim 86,
wherein the Tense Control Vector (L4(k,i): WO4 Homogeneity Vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and
a third step to examine, when the concrete editing is refused in the second step, whether the attribute check of WO2 Homogeneity Vector is Refusal or whether the Self Creation of WO3 Homogeneity Vector is Refusal, and to determine the cause of the Refusal and implement the concrete editing of the cause of Refusal.

**92.** The processing apparatus as set forth in Claim 73,
wherein the first criterion program has a logical structure which enables:

(1) To duplicate the semantic quality of the word existing in the first domain in the multiple domains as a semantic quality of a word existing in the second domain in the multiple domains; and
(2) To induce semantic quality either by substituting or by calculating from a semantic quality of a word in a domain other than the first domain.

**93.** The processing apparatus as set forth in Claim 73,
Wherein, based on a mechanism in which semantic quality formed in Consciousness meaning-space in depths of consciousness is linearly and univocally inherited in Definite meaning-space, Event meaning-space and Equivalence meaning-space, and this inherited semantic quality Coupling in Natural meaning-space is recognized as a meaning, the Domain is either one of the followings:

WO2 Pallet which has simulated the Definite meaning-space on a computer;
WO3 Pallet which has simulated the Event meaning-space on a computer; or
WO4 Pallet which has simulated the Equivalence meaning-space on a computer.

**94.** The processing apparatus as set forth in Claim 73,
wherein the second criterion program put together, regardless of the processing order by words, Tense Control Vectors of a same kind, per each domain in the multiple domains.

**95.** In the process device of Range of Claim 80,
wherein the third criterion program comprises:

A 1st step to determine send information to be displayed on Screen in a system;
A 2nd step to examine a data code in the data field in which an identifier of Pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;

A 9th step to activate WO3 Pallet or Pallet Chain Function of T1 when needed; and
A 10th step to repeat from the 1st step to the 9th step incessantly until the system is closed.

**96.** The processing apparatus as set forth in Claim 86,
wherein the third criterion program comprises:

A 1st step to determine send information to be displayed on Screen in a system;
A 2nd step to examine a data code in the data field in which an identifier of pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;
A 9th step to activate WO3 Pallet when needed;
A 10th step to repeat from the 1st step to the 9th step incessantly until the system is closed.

**97.** A software maintenance method for maintaining a software, the software being made by use of a Template program, the Template program comprising:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively; and
wherein the maintenance method comprises correcting or modifying not only the identifiers corresponding to the semantic quality obtaining subject and the media corresponding to the first to the third criterion programs, but also a calculation equation in the Tense Control Vector.

**98.** A software transplant method for transplanting a software, the software being made by use of a Template program, the Template program comprising:

A first criterion program (Tense Control Vector) to possess a prescribed first universal structure to realize semantic quality, regardless of the software's functionality, for every semantic quality belonging to media intervening a human and a first computer or a first OS on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively; and

wherein the transplant method comprises transplanting a stage the first computer is operating on to a second computer or a second OS while keeping logical structures of the first to the third criterion programs.

**99.** A software management method for managing a software, the software being made by use of a Template program, the Template program comprising:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively; and

wherein the management method comprises managing the identifier of the semantic quality obtaining subject as well as of the media corresponding to the first to the third criterion programs while keep logical structures of the criterion programs.

**100.** A Homogeneity Map creation method for creating a Homogeneity Map, the Homogeneity Map having multiple domains placed thereon for every word of a software to be produced so as to satisfy a mechanism in which a semantic quality is formed in a Consciousness meaning-space in depths of consciousness is univocally inherited into a Definite meaning-space, an Event meaning-space and an Equivalent meaning-space, has turned into a Coupling in a Natural meaning-space, and is recognized as a meaning,
wherein the multiple domains contain criterion programs which process a common structure.

**101.** The Homogeneity Map creation method as set forth in Claim 100,
wherein, when independent variable in Scenario Function which is an expression of the mechanism to induce from a certain meaning unique semantic quality that is on origin to form a meaning is Screen, File or Printouts as to media, and Word belonging to the screen, File or Printouts as to the semantic quality obtaining media, multiple domains possess a first domain (WO4) to be an Interface with a human's recognition and to implement memorizing which is a root of the human's recognition, as well as a second domain (WO2) to accept the semantic quality of the word; and
wherein a route establishing the Synchronization is determined by a control word to be specified by a Screen between the first domain and the second domain in case the word exists on the Screen, whereas the route establishing the Synchronization is determined only by whether the semantic quality is present or not between the first domain and the second domain in case the word exists on the File or the Printouts.

**102.** The Homogeneity Map creation method as set forth in Claim 100,
wherein, when independent variable in Scenario Function which is an expression of the mechanism to induce from a certain meaning unique semantic quality that is on origin to form a meaning is File or Printouts as to media, and Word belonging to the File or Printouts as to the semantic quality obtaining media, multiple domains possess a first domain (WO4) to implement recording of the semantic quality onto the File or Printouts corresponding to memorizing which is a root of human's recognition, as well as a second domain (WO2) for a reference to the File, which is corresponding to awakening the recorded semantic quality of the word; and

wherein a route establishing a Synchronization is determined by whether the semantic quality is present or not between the first domain and the second domain.

**103.** The Homogeneity Map creation method as set forth in Claim 100,
wherein, when independent variable in Scenario Function which is an expression of the mechanism to induce from a certain meaning unique semantic quality that is on origin to form a meaning is Screen, File or Printouts as to media, and Word belonging to the screen, File or Printouts as to the semantic quality obtaining media, multiple domains possess a first domain (WO4) to be an Interface with a human's recognition and to implement memorizing which is a root of the human's recognition, as well as a second domain (WO2) to accept the semantic quality of the word; and
wherein a route establishing the Synchronization is determined by a control word to be specified by a Screen between the first domain and the second domain in case the word exists on the Screen, whereas the route establishing the Synchronization is determined only by whether the semantic quality is present or not between the first domain and the second domain in case the word exists on the File or the Printouts.

**104.** A Tense Control Vector creation method for creating a Tense Control Vector by simulating a Scenario Function onto a computer space hypothetically recognizing a Definite meaning-space as WO2 Pallet, an Event meaning-space as WO3 Pallet, and an Equivalent meaning-space as WO4 Pallet,
wherein the Scenario Function is a functional expression of a mechanism in which semantic quality which has materialized in a Consciousness meaning-space existing in depths of consciousness is inherited univocally into Definite meaning-space, Event meaning-space and Equivalence meaning-space, and what is recognized as a meaning is a Coupling formed by the inherited semantic quality in a Natural meaning-space.

**105.** The Tense Control Vector creation method as set forth in Claim 104,
wherein the materialization of the semantic quality in the WO2 Pallet is implemented by a logical structure comprising:

A first step to confirm whether data code does not exist in a data field identified by i belonging to a Self Pallet concerned with a media identified by k;
A second step, when the data code is present in the data field in the first step, implement either setting a following processing route in case a word identified by the i is related to command, or confirming whether an attribute of the data code is consistent with a prescribed one in case the word identifier by the i is other than related to command; and
A third step to initialize a flag indicating a Refusal state of the second step if the second step is Accepted.

**106.** The Tense Control Vector creation method as set forth in Claim 104,
where the inheritance of the semantic quality from the WO2 Pallet to the WO3 Pallet is implemented by a logical structure comprising:

A first step to confirm whether a data code does not exist in a data field identified by i belonging to the WO2 Pallet concerned with a media identified by k; and
A second step to, when the data code is present in the data field in the first step, duplicate the data code into the data field identified by the i belonging to a Self Pallet concerned with the media identified by the k.

**107.** The Tense Control Vector creation method as set forth in Claim 104,
wherein the materialization of the semantic quality in the WO3 Pallet is implemented by a logical structure comprising:

A first step to confirm whether a data code does not exist in a data field identified by i belonging to a Self Pallet concerned with a media identified by k;
A second step to, when the data code is not present in the data field in the first step, generate Self semantic quality into a working data field identified by i belonging to the Self Pallet concerned with the media identified by k by substituting or calculating from data code existing in the other data field; and
A third step to duplicate the semantic quality in working data field into a Self data field, to set a flag indicating Restart or Not of a semantic quality embodiment only by combining data in the other Tense Control Vector, and to initialize a flag indicating a Refusal state of the second step, when a result of the second step is Accepted.

**108.** The Tense Control Vector creation method as set forth in Claim 104,
wherein the inheritance of the semantic quality from the WO3 Pallet to the WO4 Pallet is implemented by a logical structure comprising:

A first step to confirm whether a data code does not exist in a data field identified by i belonging to the WO2 Pallet concerned with a media identified by k;
A second step to, when the data code is present in the data field concerned with the WO2 Pallet in the first step, duplicate the data code into a data field identified by the i belonging to a Self Pallet concerned with the media identified by the k;
A third step to, when the data code is not present in the data field in the first step, confirm whether a data code is not present in a data field identified by the i belonging to the WO3 Pallet concerned with a media identified by the k in the third step; and
A fourth step to, when the data code is present in the data field concerned with the WO3 Pallet in the third step, duplicate the data code into a data field identified by the i belonging to a Self Pallet concerned with media identified by the k.

**109.** The Tense Control Vector creation method as set forth in Claim 104, wherein the materialization of the semantic quality in the WO4 is implemented by a logical structure comprising:

A first step to confirm whether a data code does not exist in a data field identified by i belonging to a Self Pallet concerned with a media identified by k;
A second step to, when the data code is present in the data field in the first step, embody and edit the data code; and
A third step, when the embodiment and editing is Refused in the second step, investigate if an attribute check of the WO2 Homogeneity Vector is Refused or Self Creation of the WO3 Homogeneity Vector is Refused, to determine a cause of the Refusal, and to embody and edit the cause of Refusal.

**110.** A Pallet Function creation method for creating a Pallet Function, the method comprising placing a software to be produced onto a Pallet with three domains by appropriately selecting:

a 1st program (Homogeneity Vector) to establish semantic quality to word for every word in the software;
a 2nd program (Duplication Vector) to combine word's semantic quality between Pallets; and
a 3rd program (Action Vector) to execute various actions corresponding to the software.

**111.** A processing apparatus which operates an object program, the object program comprising the first, the second, and the third programs placed by the method as set forth in Claim 110, wherein the order of placement of the first, the second, and the third programs onto the Pallet is on a free basis.

**112.** A recording medium on which an object program is recorded, the object program comprising the first, the second, and the third programs placed by the method as set forth in Claim 110, wherein the order of placement of the first, the second, and the third programs onto the Pallet is on a free basis.

**113.** A processing apparatus which operates an object program, the object program comprising the first, the second, and the third programs placed by the method as set forth in Claim 110, wherein the placement of the first, the second, and the third programs based on the method can be controlled by ignoring the order in terms of words inside each of the first, the second, and the third programs.

**114.** A recording medium on which an object program is recorded, the object program comprising the first, the second, and the third programs placed by the method as set forth in Claim 110, wherein the placement of the first, the second, and the third programs based on the method can be controlled by ignoring the order in terms of words inside each of the first, the second, and the third programs.

**115.** A processing apparatus which operates an object program, the object program comprising the first, the second, and the third programs placed by the method as set forth in Claim 110, wherein in the boundary of the first, the second, and the third programs based on the method and the existing software, the parameter is communicable via a separate and original field, other than that corresponding to words of the first, the second, and the third programs.

**116.** A recording medium on which an object program is recorded, the object program comprising the first, the second, and the third programs placed by the method as set forth in Claim 110, wherein in the boundary of the first, the second, and the third programs based on the method and the existing software, the parameter is communicable via a separate and original field, other than that corresponding to words of the first, the second, and the third programs.

**117.** A Pallet area determination method for determining a Pallet are, comprising:

preparing the area for every word specified by the Pallet Function creation method as set forth in Claim 110; and taking the area as a global area, commonly shared by the Pallets.

**118.** A Pallet Chain Function creation method for creating a Pallet Chain Function, the Pallet Chain Function operating, in order, a 1st Pallet (WO4), a 2nd Pallet (WO2) and a $3^{rd}$ Pallet (WO3), the 1st program being for inducing word's semantic quality for every word in a software to be produced, the 2nd program being for combining the semantic quality of the word between domains, the 3rd program being for executing various actions corresponding to the software, the creation method designates:

The first Pallet (WO4) as being for specific editing of the semantic quality of and object word;
The second Pallet (WO2) as being for receiving instructions based on human recognition of the object word; and
The third Pallet (WO3) as being for establishing the semantic quality of the word.

**119.** A processing apparatus which operates and object program, the object program comprising the first Pallet (WO4), the second Pallet (WO2), and the third Pallet (WO3) operated by the method as set forth in Claim 118,
wherein upon the movement of the first Pallet (WO4), the second Pallet (WO2), and the third Pallet (WO3) based on the method, the moving operation is made by autonomously controlling programs so as to satisfy a synchronization structure.

**120.** A recording medium on which an object program is recorded, the object program comprising the first Pallet (WO4), the second Pallet (WO2), and the third Pallet (WO3) operated by the method as set forth in Claim 118,
wherein upon the movement of the first Pallet (WO4), the second Pallet (WO2), and the third Pallet (WO3) based on the method, the moving operation is made by autonomously controlling programs so as to satisfy a synchronization structure.

**121.** A processing apparatus which operates and object program, the object program comprising the first Pallet (WO4), the second Pallet (WO2), and the third Pallet (WO3) operated by the method as set forth in Claim 118,
wherein the object program controls a parameter by using an independent field other than a field concerned with a word in the Pallet Chain Function, in a boundary between the Pallet Chain Function and an existing software.

**122.** A recording medium on which an object program is recorded, the object program comprising the first Pallet (WO4), the second Pallet (WO2), and the third Pallet (WO3) operated by the method as set forth in Claim 118,
wherein the object program controls a parameter by using an independent field other than a field concerned with a word in the Pallet Chain Function, in a boundary between the Pallet Chain Function and an existing software.

**123.** A Duplication Vector creation method for creating a Duplication Vector, the method comprising developing a software to be produced onto Pallets being three domains, the Duplication Vector duplicating the first Pallet's semantic quality of an object word to the second Pallet corresponding to the word in order to combine the word's semantic quality between the Pallets for every word.

**124.** A Homogeneity Vector creation method for creating a Homogeneity Vector, the method comprising developing a software to be produced onto Pallets being three domains, the Homogeneity Vector induces semantic quality for every word corresponding to the software.

**125.** The Homogeneity Vector creation method as set forth in Claim 124,
wherein on operation of a program of an object ward is autonomous without a sequence of a processing between words.

**126.** An Action Vector creation method for creating an Action Vector, the method comprising developing a software to be produced onto Pallets being three domains, the Action Vector implementing a variety of actions concerned with the software for every word corresponding the software.

**127.** The Action Vector creation method as set forth in Claim 126,

wherein the Action Vector has a Routing action to determine Process Route concerned with the software.

**128.** The Action Vector creation method as set forth in Claim 126,
wherein the Action Vector has a Command action to implement the direction to OS concerned with the software.

**129.** The Action Vector creation method as set forth in Claim 126,
wherein the Action Vector has a Structural action to initialize the area concerned with the software so as to make the software have a structure based on Lyee.

**130.** The Action Vector creation method as set forth in Claim 126,
wherein the Action Vector has a an Operation action to implement semantic quality check needed for requirements concerned with the software.

**131.** The Action Vector creation method as set forth in Claim 126,
wherein the variety of actions to be an object are autonomous without a sequence of a process between actions.

**132.** A processing apparatus for operating a development support tool program, the development support tool program comprising automatically generating a source code corresponding to a 4th program, the 4th program appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein the development support tool program automatically generates the source code of the 4th programs by defining an identifier of the word and condition on which the semantic quality is established.

**133.** A recording medium on which a development support tool program is recorded, the development support tool program comprising automatically generating a source code corresponding to a 4th program, the 4th program appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein the development support tool program automatically generates the source code of the 4th programs by defining an identifier of the word and condition on which the semantic quality is established.

**134.** A processing apparatus for operating a maintenance support tool program, the maintenance support tool program comprising maintaining a 4th program, the 4th program appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein the maintenance support tool program univocally specifies a related software by designating addition or modification of items corresponding to the software.

**135.** A recording medium on which a maintenance support tool program is recorded, the maintenance support tool program comprising maintaining a 4th program, the 4th program appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein the maintenance support tool program univocally specifies a related software by designating addition or modification of items corresponding to the software.

**136.** A processing apparatus for operating a management support tool program, the management support tool program comprising managing a $4^{th}$ program, the $4^{th}$ program appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein the management support tool program manages the number of programs and their situation.

**137.** A recording medium on which a management support tool program is recorded, the management support tool program comprising managing a $4^{th}$ program, the $4^{th}$ program appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein the management support tool program manages the number of programs and their situation.

**138.** A software loading method for loading a software to be created, the software being made by appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein the software made is loaded onto an actual machine implementing a maximum adjustment (tuning).

**139.** The software loading method as set forth in Claim 132, wherein the maximum adjustment is in terms of an integration of a memory concerned with the actual machine.

**140.** The software loading method as set forth in Claim 132, wherein the maximum adjustment is in terms of an integration of a processing time in the actual machine.

**141.** A software development method for developing a software, the software made by appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein a structure of Definitive the word belongs to, a process route corresponding to the software, and each of the words' Self Creation conditions are defined by defining them into a word table corresponding to the word.

**142.** The software development method as set forth in Claim 141,
wherein the determination of a structure of Definitive to which words belong, process route of the software, and the Self Creation requirement of each of the words can be implemented by a parallel work method in that the words are independent from each other.

**143.** The software development method as set forth in Claim 141,
wherein the determination of a structure of Definitive to which words belong, process route of the software, and the Self Creation requirement of each of the words can eliminate arbitrariness and reduce development steps in that the determination can be accomplished only by being applied to a prescribed structure, thus not requiring mental ability and design.

**144.** A software maintenance method for maintaining a software, the method comprising: determining identifier of Definitive to which words of the software belong and of the words; and
substituting the identifiers to Scenario Function which is a universal structure regulating a software, in order for the software to be univocally determined.

**145.** A software transplanting method for transplanting an existing software to a software regulatable by Lyee, the method comprising:

extracting identifiers of Definitive to which words of the software belong and elements determining processing routes;
determining a Homogeneity Map representing the process; and
substituting those into Scenario Function which is a universal structure regulating a software in order for a prescribed software to be univocally determined.

**146.** The software transplanting method as set forth in Claim 145,
wherein the existing software is a source code produced by the traditional program creation method.

**147.** A Homogeneity Map creation method for creating a Homogeneity Map , the Homogeneity Map being obtained by placing multiple domains containing criterion program that possess common structure for every word of the software, the method mapping elements that determine process routes thereon, the elements being extracted from the existing software specified in the software transplanting method as set forth in Claim 145.

**148.** A data structure replacement method for replacing a data structure, the data structure concerned with an existing software, the method comprising:

determining Definitives to which words belong, the words being extracted from the existing software specified in the software transplanting method as set forth in Claim 145; and
replacing the data structure concerned with the existing software into a data structure suitable to the criterion program which possesses a common structure for every word in the software.

**149.** A data value replacement method for replacing a data value, the data value concerned with an existing software, the method comprising:

determining definitives to which words belong the words being extracted from the existing software specified in the software transplanting method as set forth in Claim 145; and
replacing the data value concerned with the existing software into a data value on a data structure suitable to the criterion program which possesses a common structure for every word in the software.

**150.** An existing program analyzing method for analyzing an existing program, the method comprising taking a premise of converting a multiple-layer program of the existing software into a single-layer program, the exiting software specified in the software transplanting method as set forth in Claim 145.

**151.** The software transplanting method as set forth in Claim 145,
wherein the transplanting can be realized by running in parallel the existing software and the software realized after the transplanting.

**152.** The software transplanting method as set forth in Claim 151,
wherein computers on which software before and after the transplanting operates can be different.

**153.** A software development management method for managing a software development, the method using an algorithm which creates the software to be produced by appropriately selecting and placing, onto Pallets being three domains, for every word in the software to be produced, the followings:

a 1$^{st}$ program to establish semantic quality to the word;
a 2$^{nd}$ programs to combine the word' s semantic quality between Pallets; and
a 3$^{rd}$ program to execute various actions corresponding to the software.

**154.** The software development management method as set forth in Claim 153, the method comprising combining the algorithm and an application of Scenario Function, which is a universal structure regulating all software in order to realize a univocal method in terms of a software development management method.

**155.** The software development management method as set forth in Claim 153, the method comprising applying the algorithm and the Scenario Function, which is a universal structure regulating software in order for the software to be made structurally universal.

**156.** A software operational management method for managing a software operation, the method using an algorithm in order to univocally obtain a requested software even in a modification of a specification corresponding to the software, the algorithm appropriately selecting and positioning, onto a pallets being three domains, for every word in the software to be produced, the followings:

a 1st program to establish semantic quality to the word;
a 2nd programs to combine the word' s semantic quality between Pallets; and a 3rd program to execute various actions corresponding to the software,

wherein a required software can also be univocally obtained in specification modification of the software.

**157.** The software operational management method as set forth in Claim 156, the method comprising applying the algorithm and the Scenario Function, which is a universal structure regulating software in order for the software to be made structurally universal.

**158.** A parallel computer realized as LSI from an algorithm, the algorithm appropriately selecting and placing, onto Pallets being three domains, for every word in the software to be produced, the followings:

a 1st program to establish semantic quality to the word;
a 2nd programs to combine the word' s semantic quality between Pallets; and
a 3rd program to execute various actions corresponding to the software,

wherein each of the Pallets is made into a logical unit corresponding to the LSI.

**159.** The parallel computer as set forth in Claim 158,
wherein Pallet Function and Pallet Chain Function are realized as LSI made into logical units, the Pallet Function placing the 1st to 3rd programs onto the Pallet by appropriately selecting them, the Pallet Chain Function operating the first Pallet (WO4), the second Pallet (WO2) and the third Pallet (WO3), on which these 1st to 3rd programs are appropriately placed.

**160.** A judgment assisting apparatus, comprising presenting the same number of requirements as that of Word's Unit-Links concerned with the software as information for solving a subject to be solved.

**161.** The software determination method as set forth in Claim 1,
wherein the criterion program contains an order rule into programs for every word.

**162.** The software usage method as set forth in Claim 25,
wherein the criterion program contains an order rule into programs for every word.

**163.** A File determination method for determining a File, comprising:

a step to extract both a medium actualized from language materialized by a software requester as a development requirement and a word, which is a unit of establishing semantic quality existing on the medium;
a step to define respective identifiers to the extracted medium and to the word; and
a step, by attaching regularly determined identifiers to the identifiers of the defined medium and the word, to induce and to define a file corresponding to the medium and a data area related to the word on the file as files needed to realize the software,

wherein the software is univocally obtained by substituting the defined identifiers of the file and the words on the file into independent variable parts of a Scenario Function which functionally expresses a mechanism to induce from a data code the univocal semantic quality assumed on the data code.

**164.** A Homogeneity Map creation method for creating a Homogeneity Map, the Homogeneity Map being a diagram visualizing Scenario Function that makes functional expression of providence of existence, the providence of existence being a mechanism to induce from a certain meaning a univocal semantic quality which is an origin of forming the meaning via multiple domains,

**characterized in that** when independent variables of the Scenario Function are the Screen, File or Printouts as to media, and are words belonging to the Screen, File or Printouts as to a semantic quality obtaining media, the corresponding multiple domains comprise:

a $1^{st}$ area (W04) to interface with human recognition as well as implement memorization which is a root of the human recognition;
a $2^{nd}$ area (W02) to accept the word's semantic quality; and
a $3^{rd}$ area (W03) to establish semantic quality of the accepted word significance,

wherein the $3^{rd}$ area (W03), when whether establishing method of the word's semantic quality is irreversible as the providence of existence say or reversible contrary to the providence of existence is clear, is separated as W02G Pallet in the former case and as W04P Pallet in the latter case.

**165.** The Homogeneity Map creation method as set forth in Claim 164,
wherein the W03 Homogeneity Vector specifies that:

the Vectors of data input words belonging to media (k) such as Screen be mounted on W02G Pallet as LG3(k, i);
the Vector of input/output words corresponding to data output belonging to media (k) such as Screen be mounted on W04P Pallet, as Duplication Vector Type Homogeneity Vector (LY3(k, i));
the Vectors of data output words be mounted on W04 Pallet as LP3(k, i); and
the Vector of boundary words located in the boundary of T0 and T1 be mounted on W04P Pallet as R-type Duplication Vector(LR3(b, i)), respectively.

**166.** A software development business method, comprising:

a step for extracting words in natural language from a software development requirement possessed by clients;
a step for defining Definitive identifiers and word identifiers corresponding to the extracted words in accordance with Lyee methodology and for registering the defined identifiers to a tool related to the Lyee methodology, the Lyee methodology determining aimed software univocally by applying Scenario Function which functionally expresses a mechanism in which semantic quality established in the Consciousness meaning-space in the depths of consciousness, is univocally handed over through Definite meaning-space, Event meaning-space and Equivalence meaning-space;
a step for automatically generating the software by use of the tool;
a step for automatically generating the software by the tool, in case defining operational requirement is judged to be necessary as a result of the automatic generation, after requesting the client to define the operational requirement and reflecting the operational requirement presented by the client onto the tool;and
a step for delivering the generated software to the client.

**167.** A software univocal determination method for univocally determining a software, comprising:

grasping a providence of existence as a philosophical proposition, the proposition regulating a semantic quality established in Consciousness meaning-space in depths of consciousness being led to human recognition; and substituting applicable identifiers to undefined parts of Scenario Function so as to univocally determine the software, the Scenario Function being a universal model devised combining the philosophical proposition with a set theory.

**168.** A software univocal determination method for univocally determining a software, comprising:

reconstructing a providence of existence in terms of a set theory, the providence regulating a semantic quality established in Consciousness meaning-space in depths of consciousness being led to human recognition; and substituting applicable identifiers to undefined parts of Scenario Function so as to univocally determine the software, the Scenario Function being made into an algorithm by use of three dimensional spatial model.

**169.** A consciousness model devising method for devising a consciousness model, comprising:

grasping a consciousness structure existing in depths of consciousness as a philosophical proposition;
combining the philosophical proposition with a set theory to devise a functional expression; and
using a consciousness model purposing to obtain a solution of the function to obtain a TRUE solution for the philosophical proposition.

**170.** An algorithm devising method for devising an algorithm, comprising:

grasping a consciousness structure existing in depths of consciousness as a philosophical proposition;
devising a universal Consciousness Model by combining the philosophical proposition with a set theory;
making the universal Consciousness Model into an algorithm by using Three-Dimension Spatial Model; and
obtaining a TRUE solution of the philosophical proposition by using the algorithm.

**171.** A software univocal determination method for univocally determining a software, comprising:

grasping a consciousness structure in depths of consciousness as a philosophical proposition;
devising a universal Consciousness Model by combining the philosophical proposition with a set theory; and
devising an algorithm by use of Three-Dimension Spatial Model against the devised universal Consciousness Model to make a Scenario Function including undefined part in it into another algorithm,

wherein the software is univocally determined by substituting an appropriate identifier into the undefined part of the Scenario Funciton.

**172.** A program product comprising, as its constituent programs:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively.

**173.** A transmission wave, the wave making programs be actualized as corresponding functions by a computer on which the programs are installed, the programs specified as:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively.

**174.** A paradigm based program, having a function to realize programs as accorded with a program, the program specified as:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively; and
wherein the paradigm gives the predetermined universal structure.

**Amended claims under Art. 19.1 PCT**

**1.** A software determination method, the method using a Template, the Template comprising:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively.

**2.** The software determination method as set forth in Claim 1,
wherein the media is at least either Screen, Printouts or File.

**3.** The software determination method as set forth in Claim 1,
wherein a unit of establishing semantic quality can be regarded as only words belonging to the media in the real sphere of a computer.

**4.** The software determination method as set forth in Claim 1,
wherein the semantic quality is univocally obtained by substituting an identifier of the media into an independent variable of a Scenario Function, the Scenario Function being a functional expression of a mechanism to induce from a data code the unique semantic-quality which assumes on the data code.

**5.** The software determination method as set forth in Claim 1,

wherein the structures of the first, the second and the third criterion programs are created based on a paradigm which simulates on a computer a 'meaning-recognition structure' of recognizing a meaning from the semantic quality.

**6.** The software determination method as set forth in Claim 1,

wherein the structures of the first, the second and the third criterion programs are identified by a Scenario Function, the Scenario Function being a functional expression of a mechanism to induce from a data code the univocal semantic quality which assumes on the data code.

**7.** The software determination method as set forth in Claim 6,

wherein under this mechanism, semantic quality which has materialized in a Consciousness meaning-space existing in depths of consciousness is inherited linearly and univocally into Definite meaning-space, Event meaning-space and Equivalence meaning-space and what is recognized as a meaning is a difference between a Coupling formed by this inherited semantic quality in a Natural meaning-space and another Coupling formed by the other semantic quality.

**8.** The software determination method as set forth in Claim 7,

wherein when L2 (k,i) represents first Tense Control Vector (WO2 Homogeneity Vector) which univocally induces semantic quality of a word plotted on WO2 Pallet simulating, on a computer, the Definite meaning-space; Y3 (k,i) represents second Tense Control Vector (the former; WO3 Duplication Vector, the latter: WO3 Homogeneity Vector) which univocally induces semantic quality of a word plotted on WO3 Pallet simulating, on a computer, the Event meaning-space; Y4 (k,i) represents third Tense Control Vector (the former: WO4 Duplication Vector, the latter; WO4 Homogeneity Vector) which univocally induces semantic quality of a word plotted on WO4 Pallet simulating, on a computer, the Equivalence meaning-space; 'Φ p{,}k' represents Pallet Function which gathers, regardless of their orders, the Tense Control Vectors, the Vectors being components enclosed by '{' and '}', for the same times as denoted by k or for all the times as represented by the system in case 'k' is lacking; k represents an identifier of the media; i represents an identifier of a word regarded as a unit for forming the semantic quality; Φ0( + + +) represents Pallet Chain Function which links the pallets, which are components inside the (), and are processes to linearly induce semantic quality via the Definite meaning-space, the Event meaning-space and the Equivalence meaning-space, a Scenario Function is expressed by the following:

$$T0= \Phi0(+ \{\Phi p\{ \quad , L2\ (k,i)\}\ \}k$$

$$+ \Phi p\ \{Y3\ (k,i),\ L3\ (k,i)\}$$

$$+ \{\Phi p\ \{Y4\ (k,i),\ L4\ (k,i)\}\}\ k).$$

**9.** The software determination method as set forth in Claim 8,

wherein the Tense Control Vector (L2 (k,i): WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**10.** The software determination method as set forth in Claim 8,

wherein the Tense Control Vector (Y3 (k,i): WO3 Duplication Vector) expressed by Y3 (k,i) on WO3 Pallet, which has simulated the Event meaning -space on a computer, comprises:

a first step to confirm whether a data code exists in a data field to be identified by the i belonging to the WO2 Pallet of media identified by the k; and
a second step to duplicate, when the data code is present in the data field in the first step, the data code into a data field identified by the i belonging to the self Pallet of media identified by k.

**11.** The software determination method as set forth in Claim 8,
Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**12.** The software determination method as set forth in Claim 8,
Wherein the Tense control Vector (Y4 (k,i): WO4 Duplicate Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**13.** The software determination method as set forth in Claim 8,
wherein the Tense Control Vector (L4(k,i); WO4 Homogeneity vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and
a third step to examine, when the concrete editing is refused in the second step, whether the attribute check of WO2 Homogeneity Vector is Refusal or whether the Self Creation of WO3 Homogeneity Vector is Refusal, and to determine the cause of the Refusal and implement the concrete editing of the cause of Refusal.

**14.** The software determination method as set forth in Claim 7,
wherein the L2 (k,i) represents Tense Control Vector (WO2 Homogeneity Vector) which univocally induces semantic quality of WO2 Pallet simulating the Definite meaning-space on a computer; Y3 (k,i) and L3 (k,i) represent Tense Control Vector (the former: WO3 Duplication Vector, the latter: WO3 Homogeneity Vector) which univocally induces semantic quality of WO3 Pallet simulating the Event meaning-space on a computer, Y4(k,i) and L4 (k,i) represent Tense Control Vector (the former: WO4 Duplication Vector, the latter: WO4 Homogeneity Vector) which univocally induces semantic quality of WO4 Pallet simulating the Equivalence meaning-space on a computer; 'Φ p{,}k' represents Pallet Function which collects, for the same amount as k or for all the system in case there is no k, Tense Control Vectors which are components enclosed by '{' and '}', while that collection having no condition of their order; k represents an identifier of the media; i represents an identifier of a word regarded as a unit for forming the semantic quality ; Φ0(+ + +) represents Pallet Chain Function which links the Pallets, which are components inside the (), which is a process to linearly induce semantic quality via Definite meaning-space, Event meaning-space and Equivalence meaning-space; T1(f) represents Scenario Function in a case where the kind of the media includes and file or Printouts as well; and P2(j), P3(j) and P4(j) respectively represent Action Vectors with a complementary logical structure when simulating on a computer the mechanism in the WO2 Pallet, the WO3 Pallet and the WO4 Pallet, respectively, then, the Scenario Function is expressed by the following:

$$T0= \Phi 0(+ \{\Phi p\{ \quad , L2(k,i), P2(j)\} \}k$$

$$+ \Phi p\{Y3(k,i), L3(k,i), P3(j), T1(f)\}$$

$$+ \{\Phi p\{Y4(k,i), L4(k,i), P4(j)\}\} k)$$

$$T1 (f) = \Phi 1(\{\Phi p(rf,2)\{ \quad , L2(r,i), P2(r,j), P2(j)\}\} r$$

$$+ (\{\Phi p (rf,3) \{Y3 (r.i), L3 (r,i), L3 (f,i), P3 (j)\}\}$$

$$+ \{\Phi p(fr,4)\{Y3(f,i), L4(f,j), P4(f,j), P4(j)\}\}f)$$

**15.** The software determination method as set forth in Claim 14,

wherein the Tense Control Vector (L2 (k,i): WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**16.** The software determination method as set forth in Claim 14,

wherein the Tense Control Vector (Y3 (k,i); WO3 Duplication Vector) expressed by Y3 (k,i) on WO3 Pallet, which has simulated the Event meaning-space on a computer, comprises:

a first step to confirm whether a data code exists in a data field to be identified by the i belonging to the WO2 Pallet of media identified by the k; and
a second step to duplicate, when the data code is present in the data field in the first step, the data code into a data field identified by the i belonging to the self Pallet of media identified by k.

**17.** The software determination method as set forth in Claim 14,

Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**18.** The software determination method as set forth in Claim 14,

Wherein the Tense control Vector (Y4 (k,i): WO4 Duplicate Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**19.** The software determination as set forth in Claim 14,
wherein the Tense Control Vector (L4(k,i): WO4 Homogeneity vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and
a third step to examine, when the concrete editing is refused in the second step, whether the attribute check of WO2 Homogeneity Vector is Refusal or whether the Self Creation of WO3 Homogeneity Vector is Refusal, and to determine the cause of the Refusal and implement the concrete editing of the cause of Refusal.

**20.** The software determination as set forth in Claim 1,
wherein the first criterion program has a logical structure which enables:

(1) To duplicate the semantic quality of the word existing in the first domain in the multiple domains as a semantic quality of a word existing in the second domain in the multiple domains; and
(2) To induce semantic quality either by substituting or by calculating from a semantic quality of a word in a domain other than the first domain.

**21.** The software determination method as set forth in Claim 1,
Wherein, based on a mechanism in which semantic quality formed in Consciousness meaning-space in depths of consciousness is linearly and univocally inherited in Definite meaning-space. Event meaning-space and Equivalence meaning-space, and this inherited semantic quality Coupling in Natural meaning-space is recognized as a meaning, the Domain is either one of the followings:

WO2 Pallet which has simulated the Definite meaning-space on a computer,
WO3 Pallet which has simulated the Event meaning-space on a computer, or
WO4 Pallet which has simulated the Equivalence meaning-space on a computer.

**22.** The software determination method as set forth in Claim 1,
wherein the second criterion program put together, regardless of the processing order by words, Tense Control Vectors of a same kind, per each domain in the multiple domains.

**23.** (Amended) The software determination method as set forth in Claim 14,
wherein the third criterion program comprises:

A 1st step to determine send information to be displayed on Screen in a system;
A 2nd step to examine a data code in the data field in which an identifier of Pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;
A 9th step to activate WO3 Pallet or Pallet Chain Function of T1 when needed; and
A 10th step to repeat from the 1st step to the 9th step incessantly until the system is closed

**24.** (Amended) The software determination method as set forth in Claim 8,
wherein the third criterion program comprises:

A 1st step to determine send information to be displayed on Screen in a system;
A 2nd step to examine a data code in the data field in which an identifier of pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;
A 9th step to activate WO3 Pallet when needed;
A 10th step to repeat from the 1st step to the 9th step incessantly until the system is closed.

**25.** A software usage method, the software comprising:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively; and
wherein the software usage method actualizes a required function via the software by means of operating the univocally determined software so as to maintain Synchronous Structure by a unit of the semantic quality.

**26.** The software usage method as set forth in Claim 25,
wherein the media is at least either Screen, Printouts or File.

**27.** The software usage method as set forth in Claim 25,
wherein a unit of establishing semantic quality can be regarded as only words belonging to the media in the real sphere of a computer.

**28.** The software usage method as set forth in Claim 25,
wherein the semantic quality is univocally obtained by substituting an identifier of the media into an independent variable of a Scenario Function, the Scenario Function being a functional expression of a mechanism to induce from a data code the unique semantic-quality which assumes on the data code.

**29.** The software usage method as set forth in Claim 25,
wherein the structures of the first, the second and the third criterion programs are created based on a paradigm which simulates on a computer a 'meaning-recognition structure' of recognizing a meaning from the semantic quality.

**30.** The software usage method as set forth in Claim 25,
wherein the structures of the first, the second and the third criterion programs are identified by a Scenario Function, the Scenario Function being a functional expression of a mechanism to induce from a data code the univocal semantic quality which assumes on the data code.

**31.** The software usage method as set forth in Claim 30,
wherein under this mechanism, semantic quality which has materialized in a Consciousness meaning-space existing in depths of consciousness is inherited linearly and univocally into Definite meaning-space, Event meaning-space and Equivalence meaning-space and what is recognized as a meaning is a difference between a Coupling formed by this inherited semantic quality in a Natural meaning-space and another Coupling formed by the other semantic quality.

**32.** The software usage method as set forth in Claim 31,

wherein when L2 (k,i) represents first Tense Control Vector (WO2 Homogeneity Vector) which univocally induces semantic quality of a word plotted on WO2 Pallet simulating, on a computer, the Definite meaning-space; Y3 (k,i) represents second Tense Control Vector (the former; WO3 Duplication Vector, the latter: WO3 Homogeneity Vector) which univocally induces semantic quality of a word plotted on WO3 Pallet simulating, on a computer, the Event meaning-space; Y4 (k,i) represents third Tense Control Vector (the former: WO4 Duplication Vector, the latter; WO4 Homogeneity Vector) which univocally induces semantic quality of a word plotted on WO4 Pallet simulating, on a computer, the Equivalence meaning-space; 'Φ p{,}k' represents Pallet Function which gathers, regardless of their orders, the Tense Control Vectors, the Vectors being components enclosed by '{' and '}', for the same times as denoted by k or for all the times as represented by the system in case 'k' is lacking; k represents an identifier of the media; i represents an identifier of a word regarded as a unit for forming the semantic quality; Φ0( + + +) represents Pallet Chain Function which links the pallets, which are components inside the (), and are processes to linearly induce semantic quality via the Definite meaning-space, the Event meaning-space and the Equivalence meaning-space, a Scenario Function is expressed by the following:

$$T0 = \Phi 0(+ \{\Phi p\{\quad , L2(k,i)\}\}k$$

$$+ \Phi p\{Y3(k,i), L3(k,i)\}$$

$$+ \{\Phi p\{Y4(k,i), L4(k,i)\}\}k).$$

**33.** The software usage method as set forth in Claim 32,

wherein the Tense Control Vector (L2 (k,i): WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**34.** The software usage method as set forth in Claim 32,

wherein the Tense Control Vector (Y3 (k,i): WO3 Duplication Vector) expressed by Y3 (k,i) on WO3 Pallet, which has simulated the Event meaning -space on a computer, comprises:

a first step to confirm whether a data code exists in a data field to be identified by the i belonging to the WO2 Pallet of media identified by the k; and
a second step to duplicate, when the data code is present in the data field in the first step, the data code into a data field identified by the i belonging to the self Pallet of media identified by k.

**35.** The software usage method as set forth in Claim 32,

Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**36.** The software usage method as set forth in Claim 32,

Wherein the Tense control Vector (Y4 (k,i): WO4 Duplicate Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**37.** The software usage method as set forth in Claim 32,

wherein the Tense Control Vector (L4(k,i): WO4 Homogeneity vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and
a third step to examine, when the concrete editing is refused in the second step, whether the attribute check of WO2 Homogeneity Vector is Refusal or whether the Self Creation of WO3 Homogeneity Vector is Refusal, and to determine the cause of the Refusal and implement the concrete editing of the cause of Refusal.

**38.** The software usage method as set forth in Claim 31,

wherein the L2 (k,i) represents Tense Control Vector (WO2 Homogeneity Vector) which univocally induces semantic quality of WO2 Pallet simulating the Definite meaning-space on a computer, Y3 (k,i) and L3 (k,i) represent Tense Control Vector (the former: WO3 Duplication Vector, the latter: WO3 Homogeneity Vector) which univocally induces semantic quality of WO3 Pallet simulating the Event meaning-space on a computer; Y4(k,i) and L4 (k,i) represent Tense Control Vector (the former: WO4 Duplication Vector, the latter: WO4 Homogeneity Vector) which univocally induces semantic quality of WO4 Pallet simulating the Equivalence meaning-space on a computer; 'Φ p{,}k' represents Pallet Function which collects, for the same amount as k or for all the system in case there is no k, Tense Control Vectors which are components enclosed by '{' and '}', while that collection having no condition of their order; k represents an identifier of the media; i represents an identifier of a word regarded as a unit for forming the semantic quality; Φ0(+ + +) represents Pallet Chain Function which links the Pallets, which are components inside the (), which is a process to linearly induce semantic quality via Definite meaning-space, Event meaning-space and Equivalence meaning-space; T1(f) represents Scenario Function in a case where the kind of the media includes and file or Printouts as well; and P2(j), P3(j) and P4(j) respectively represent Action Vectors with a complementary logical structure when simulating on a computer the mechanism in the WO2 Pallet, the WO3 Pallet and the WO4 Pallet, respectively, then, the Scenario Function is expressed by the following:

$$T0 = \Phi 0(+ \{\Phi p\{\quad , L2(k,i), P2(j)\}\}k$$

$$+ \Phi p\{Y3(k,i), L3(k,i), P3\ (j), T1(f)\}$$

$$+ \{\Phi p\{Y4(k,i), L4(k,i), P4(j)\}\}k)$$

$$T1(f) = \Phi 1(\{\Phi p(rf,2)\ \{\quad , L2(r,i), P2(r,j), P2(j)\}\}\ r$$

$$+ (\{\Phi p(rf,3)\ \{Y3\ (r.i), L3\ (r,i), L3\ (f,i), P3\ (j)\}\}$$

+ {Φp(fr,4){Y3(f,i), L4(f,j), P4(f,j), P4(j)}}f)

**39.** The software usage method as set forth in Claim 38,

wherein the Tense Control Vector (L2 (k,i); WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**40.** The software usage method as set forth in Claim 38,

wherein the Tense Control Vector (Y3 (k,i): WO3 Duplication Vector) expressed by Y3 (k,i) on WO3 Pallet, which has simulated the Event meaning-space on a computer, comprises:

a first step to confirm whether a data code exists in a data field to be identified by the i belonging to the WO2 Pallet of media identified by the k; and
a second step to duplicate, when the data code is present in the data field in the first step, the data code into a data field identified by the i belonging to the self Pallet of media identified by k.

**41.** The software usage method as set forth in Claim 38,

Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**42.** The software usage method as set forth in Claim 38,

Wherein the Tense control Vector (Y4 (k,i): WO4 Duplicate Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**43.** The software usage method as set forth in Claim 38,

wherein the Tense Control Vector (L4(k,i): WO4 Homogeneity vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and
a third step to examine, when the concrete editing is refused in the second step, whether the attribute check of WO2 Homogeneity Vector is Refusal or whether the Self Creation of WO3 Homogeneity Vector is Refusal, and to determine the cause of the Refusal and implement the concrete editing of the cause of Refusal.

**44.** The software usage method as set forth in Claim 25,
wherein the first criterion program has a logical structure which enables:

(1) To duplicate the semantic quality of the word existing in the first domain in the multiple domains as a semantic quality of a word existing in the second domain in the multiple domains; and
(2) To induce semantic quality either by substituting or by calculating from a semantic quality of a word in a domain other than the first domain.

**45.** The software usage method as set forth in Claim 25,
Wherein, based on a mechanism in which semantic quality formed in Consciousness meaning-space in depths of consciousness is linearly and univocally inherited in Definite meaning-space, Event meaning-space and Equivalence meaning-space, and this inherited semantic quality Coupling in Natural meaning-space is recognized as a meaning, the Domain is either one of the followings:

WO2 Pallet which has simulated the Definite meaning-space on a computer;
WO3 Pallet which has simulated the Event meaning-space on a computer, or
WO4 Pallet which has simulated the Equivalence meaning-space on a computer.

**46.** The software usage method as set forth in Claim 25,
wherein the second criterion program put together, regardless of the processing order by words, Tense Control Vectors of a same kind, per each domain in the multiple domains.

**47.** (Amended) The software usage method as set forth in Claim 38,
wherein the third criterion program comprises:

A 1st step to determine send information to be displayed on Screen in a system;
A 2nd step to examine a data code in the data field in which an identifier of Pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;
A 9th step to activate WO3 Pallet or Pallet Chain Function of T1 when needed; and
A 10th step to repeat from the 1st step to the 9th step incessantly until the system is closed.

**48.** (Amended) The software usage method as set forth in Claim 32,
wherein the third criterion program comprises:

A 1st step to determine send information to be displayed on Screen in a system;
A 2nd step to examine a data code in the data field in which an identifier of pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;
A 9th step to activate WO3 Pallet when needed;
A 10th step to repeat from the 1st step to the 9th step incessantly until the system is closed.

**49.** The recording medium on which a Template program is recorded, the Template program comprising:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively.

**50.** The recording medium as set forth in Claim 49,
wherein the media is at least either Screen, Printouts or File.

**51.** The recording medium as set forth in Claim 49,
wherein a unit of establishing semantic quality can be regarded as only words belonging to the media in the real sphere of a computer.

**52.** The recording medium as set forth in Claim 49,
wherein the semantic quality is univocally obtained by substituting an identifier of the media into an independent variable of a Scenario Function, the Scenario Function being a functional expression of a mechanism to induce from a data code the unique semantic-quality which assumes on the data code.

**53.** The recording medium as set forth in Claim 49,
wherein the structures of the first, the second and the third criterion programs are created based on a paradigm which simulates on a computer a 'meaning-recognition structure' of recognizing a meaning from the semantic quality.

**54.** The recording medium as set forth in Claim 49,
wherein the structures of the first, the second and the third criterion programs are identified by a Scenario Function, the Scenario Function being a functional expression of a mechanism to induce from a data code the univocal semantic quality which assumes on the data code.

**55.** The recording medium as set forth in Claim 54,
wherein under this mechanism, semantic quality which has materialized in a Consciousness meaning-space existing in depths of consciousness is inherited linearly and univocally into Definite meaning-space, Event meaning-space and Equivalence meaning-space and what is recognized as a meaning is a difference between a Coupling formed by this inherited semantic quality in a Natural meaning-space and another Coupling formed by the other semantic quality.

**56.** The recording medium as set forth in Claim 55,
wherein when L2 (k,i) represents first Tense Control Vector (WO2 Homogeneity Vector) which univocally induces semantic quality of a word plotted on WO2 Pallet simulating, on a computer, the Definite meaning-space; Y3 (k,i) represents second Tense Control Vector (the former; WO3 Duplication Vector, the latter: WO3 Homogeneity Vector) which univocally induces semantic quality of a word plotted on WO3 Pallet simulating, on a computer, the Event meaning-space; Y4 (k,i) represents third Tense Control Vector (the former: WO4 Duplication Vector, the latter; W04 Homogeneity Vector) which univocally induces semantic quality of a word plotted on WO4 Pallet simulating, on a computer, the Equivalence meaning-space; 'Φ p{,}k' represents Pallet Function which gathers, regardless of their orders, the Tense Control Vectors, the Vectors being components enclosed by '{' and '}', for the same times as denoted by k or for all the times as represented by the system in case 'k' is lacking; k represents an identifier of the media; i represents an identifier of a word regarded as a unit for forming the semantic quality; Φ0( + + + ) represents Pallet Chain Function which links the pallets, which are components inside the (), and are processes to linearly induce semantic quality via the Definite meaning-space, the Event meaning-space and the Equivalence meaning-space, a Scenario Function is expressed by the following:

T0= Φ0 (+ {Φp{ , L2 (k,i)} }k

+ Φp {Y3 (k,i) , L3 (k,i)}

+ {Φp {Y4 (k,i), L4 (k,i)}} k).

**57.** The recording medium as set forth in Claim 56,

wherein the Tense Control Vector (L2 (k,i): WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**58.** The recording medium as set forth in Claim 56,

wherein the Tense Control Vector (Y3 (k,i): WO3 Duplication Vector) expressed by Y3 (k,i) on WO3 Pallet, which has simulated the Event meaning -space on a computer, comprises:

a first step to confirm whether a data code exists in a data field to be identified by the i belonging to the WO2 Pallet of media identified by the k; and
a second step to duplicate, when the data code is present in the data field in the first step, the data code into a data field identified by the i belonging to the self Pallet of media identified by k.

**59.** The recording medium as set forth in Claim 56,

Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**60.** The recording medium as set forth in Claim 56,

Wherein the Tense control Vector (Y4 (k,i): WO4 Duplicate Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**61.** The recording medium as set forth in Claim 56,
wherein the Tense Control Vector (L4(k,i): WO4 Homogeneity vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and
a third step to examine, when the concrete editing is refused in the second step, whether the attribute check of WO2 Homogeneity Vector is Refusal or whether the Self Creation of WO3 Homogeneity Vector is Refusal, and to determine the cause of the Refusal and implement the concrete editing of the cause of Refusal.

**62.** The recording medium as set forth in Claim 55,
wherein the L2 (k,i) represents Tense Control Vector (WO2 Homogeneity Vector) which univocally induces semantic quality of WO2 Pallet simulating the Definite meaning-space on a computer; Y3 (k,i) and L3 (k,i) represent Tense Control Vector (the former: WO3 Duplication Vector, the latter: WO3 Homogeneity Vector) which univocally induces semantic quality of WO3 Pallet simulating the Event meaning-space on a computer; Y4(k,i) and L4 (k,i) represent Tense Control Vector (the former: WO4 Duplication Vector, the latter: WO4 Homogeneity Vector) which univocally induces semantic quality of WO4 Pallet simulating the Equivalence meaning-space on a computer; 'Φ p{,}k' represents Pallet Function which collects, for the same amount as k or for all the system in case there is no k, Tense Control Vectors which are components enclosed by '{' and '}', while that collection having no condition of their order; k represents an identifier of the media; i represents an identifier of a word regarded as a unit for forming the semantic quality ; Φ0(+ + +) represents Pallet Chain Function which links the Pallets, which are components inside the (), which is a process to linearly induce semantic quality via Definite meaning-space, Event meaning-space and Equivalence meaning-space; T1(f) represents Scenario Function in a case where the kind of the media includes and file or Printouts as well; and P2(j), P3(j) and P4(j) respectively represent Action Vectors with a complementary logical structure when simulating on a computer the mechanism in the WO2 Pallet, the WO3 Pallet and the WO4 Pallet, respectively, then, the Scenario Function is expressed by the following:

$$T0 = \Phi 0(+ \{\Phi p\{ \quad , L2(k,i), P2(j)\} \}k$$
$$+ \Phi p\{Y3(k,i), L3(k,i), P3 (j), T1(f)\}$$
$$+ \{\Phi p\{Y4(k,i), L4(k,i), P4(j)\}\}k)$$

$$T1 (f) = \Phi 1(\{\Phi p(rf,2) \{ \quad , L2 (r,i), P2 (r,j), P2 (j)\}\} r$$
$$+ (\{\Phi p(rf,3) \{Y3 (r.i), L3 (r,i), L3 (f,i), P3 (j)\}\}$$
$$+ \{\Phi p(fr,4)\{Y3(f,i), L4(f,j), P4(f,j), P4(j)\}\}f)$$

**63.** The recording medium as set forth in Claim 62,
wherein the Tense Control Vector (L2 (k,i): WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**64.** The recording medium as set forth in Claim 62,
wherein the Tense Control Vector (Y3 (k,i): WO3 Duplication Vector) expressed by Y3 (k,i) on WO3 Pallet, which has simulated the Event meaning-space on a computer, comprises:

a first step to confirm whether a data code exists in a data field to be identified by the i belonging to the WO2 Pallet of media identified by the k; and
a second step to duplicate, when the data code is present in the data field in the first step, the data code into a data field identified by the i belonging to the self Pallet of media identified by k.

**65.** The recording medium as set forth in Claim 62,
Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**66.** The recording medium as set forth in Claim 62,
Wherein the Tense control Vector (Y4 (k,i): WO4 Duplicate Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**67.** The recording medium as set forth in Claim 62,
wherein the Tense Control Vector (L4(k,i): WO4 Homogeneity vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and
a third step to examine, when the concrete editing is refused in the second step, whether the attribute check of WO2 Homogeneity Vector is Refusal or whether the Self Creation of WO3 Homogeneity Vector is Refusal, and to determine the cause of the Refusal and implement the concrete editing of the cause of Refusal.

**68.** The recording medium as set forth in Claim 49,
wherein the first criterion program has a logical structure which enables:

(1) To duplicate the semantic quality of the word existing in the first domain in the multiple domains as a semantic quality of a word existing in the second domain in the multiple domains; and
(2) To induce semantic quality either by substituting or by calculating from a semantic quality of a word in a domain other than the first domain.

**69.** The recording medium as set forth in Claim 49,

Wherein, based on a mechanism in which semantic quality formed in Consciousness meaning-space in depths of consciousness is linearly and univocally inherited in Definite meaning-space, Event meaning-space and Equivalence meaning-space, and this inherited semantic quality Coupling in Natural meaning-space is recognized as a meaning, the Domain is either one of the followings:

WO2 Pallet which has simulated the Definite meaning-space on a computer;
WO3 Pallet which has simulated the Event meaning-space on a computer; or
WO4 Pallet which has simulated the Equivalence meaning-space on a computer.

**70.** The recording medium as set forth in Claim 49,

wherein the second criterion program put together, regardless of the processing order by words, Tense Control Vectors of a same kind, per each domain in the multiple domains.

**71.** (Amended) The recording medium as set forth in Claim 62,

wherein the third criterion program comprises:

A 1st step to determine send information to be displayed on Screen in a system;
A 2nd step to examine a data code in the data field in which an identifier of Pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;
A 9th step to activate WO3 Pallet or Pallet Chain Function of T1 when needed; and
A 10th step to repeat from the 1st step to the 9th step incessantly until the system is closed.

**72.** (Amended) The recording medium as set forth in Claim 56,

wherein the third criterion program comprises:

A 1st step to determine send information to be displayed on Screen in a system;
A 2nd step to examine a data code in the data field in which an identifier of pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;
A 9th step to activate WO3 Pallet when needed;
A 10th step to repeat from the 1st step to the 9th step incessantly until the system is closed.

**73.** A processing apparatus for determining a software by use of a Template program, the Template program comprising:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively.

**74.** The processing apparatus set forth in Claim 73,
wherein the media is at least either Screen, Printouts or File

**75.** The processing apparatus set forth in Claim 73,
wherein a unit of establishing semantic quality can be regarded as only words belonging to the media in the real sphere of a computer.

**76.** The processing apparatus set forth in Claim 73,
wherein the semantic quality is univocally obtained by substituting an identifier of the media into an independent variable of a Scenario Function, the Scenario Function being a functional expression of a mechanism to induce from a data code the unique semantic-quality which assumes on the data code.

**77.** The processing apparatus set forth in Claim 73,
wherein the structures of the first, the second and the third criterion programs are created based on a paradigm which simulates on a computer a 'meaning-recognition structure' of recognizing a meaning from the semantic quality.

**78.** The processing apparatus set forth in Claim 73,
wherein the structures of the first, the second and the third criterion programs are identified by a Scenario Function, the Scenario Function being a functional expression of a mechanism to induce from a data code the univocal semantic quality which assumes on the data code.

**79.** The processing apparatus set forth in Claim 78,
wherein under this mechanism, semantic quality which has materialized in a Consciousness meaning-space existing in depths of consciousness is inherited linearly and univocally into Definite meaning-space, Event meaning-space and Equivalence meaning-space and what is recognized as a meaning is a difference between a Coupling formed by this inherited semantic quality in a Natural meaning-space and another Coupling formed by the other semantic quality.

**80.** The processing apparatus set forth in Claim 79,
wherein when L2 (k,i) represents first Tense Control Vector (WO2 Homogeneity Vector) which univocally induces semantic quality of a word plotted on WO2 Pallet simulating, on a computer, the Definite meaning-space; Y3 (k,i) represents second Tense Control Vector (the former; WO3 Duplication Vector, the latter: WO3 Homogeneity Vector) which univocally induces semantic quality of a word plotted on WO3 Pallet simulating, on a computer, the Event meaning-space; Y4 (k,i) represents third Tense Control Vector (the former: WO4 Duplication Vector, the latter; WO4 Homogeneity Vector) which univocally induces semantic quality of a word plotted on WO4 Pallet simulating, on a computer, the Equivalence meaning-space; 'Φ p{,}k' represents Pallet Function which gathers, regardless of their orders, the Tense Control Vectors, the Vectors being components enclosed by '{' and '}', for the same times as denoted by k or for all the times as represented by the system in case 'k' is lacking; k represents an identifier of the media; i represents an identifier of a word regarded as a unit for forming the semantic quality; Φ0( + + + ) represents Pallet Chain Function which links the pallets, which are components inside the (), and are processes to linearly induce semantic quality via the Definite meaning-space, the Event meaning-space and the Equivalence meaning-space, a Scenario Function is expressed by the following:

$$T0 = \Phi 0\ (+ \{\Phi p\ \{\quad , L2(k,i)\}\}k$$

$$+ \Phi p\ \{Y3\ (k,i), L3(k,i)\}$$

$$+ \{\Phi p\ \{Y4\ (k,i), L4\ (k,i)\}\}\ k).$$

**81.** The processing apparatus set forth in Claim 80,

wherein the Tense Control Vector (L2 (k,i): WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**82.** The processing apparatus set forth in Claim 80,
wherein the Tense Control Vector (Y3 (k,i): WO3 Duplication Vector) expressed by Y3 (k,i) on WO3 Pallet, which has simulated the Event meaning -space on a computer, comprises:

a first step to confirm whether a data code exists in a data field to be identified by the i belonging to the WO2 Pallet of media identified by the k; and
a second step to duplicate, when the data code is present in the data field in the first step, the data code into a data field identified by the i belonging to the self Pallet of media identified by k.

**83.** The Processing apparatus as set for the in Claim 80,
Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**84.** The processing apparatus as set forth in Claim 80,
Wherein the Tense control Vector (Y4 (k,i): WO4 Duplicate Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**85.** The processing apparatus as set forth in Claim 80,
wherein the Tense Control Vector (L4(k,i): WO4 Homogeneity vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and
a third step to examine, when the concrete editing is refused in the second step, whether the attribute check of WO2 Homogeneity Vector is Refusal or whether the Self Creation of W03 Homogeneity Vector is Refusal, and to determine the cause of the Refusal and implement the concrete editing of the cause of Refusal.

**86.** The processing apparatus as set forth in Claim 79,

wherein the L2 (k,i) represents Tense Control Vector (WO2 Homogeneity Vector) which univocally induces semantic quality of WO2 Pallet simulating the Definite meaning-space on a computer; Y3 (k,i) and L3 (k,i) represent Tense Control Vector (the former: WO3 Duplication Vector, the latter: WO3 Homogeneity Vector) which univocally induces semantic quality of WO3 Pallet simulating the Event meaning-space on a computer; Y4(k,i) and L4 (k,i) represent Tense Control Vector (the former: WO4 Duplication Vector, the latter: WO4 Homogeneity Vector) which univocally induces semantic quality of WO4 Pallet simulating the Equivalence meaning-space on a computer; 'Φ p{,}k' represents Pallet Function which collects, for the same amount as k or for all the system in case there is no k, Tense Control Vectors which are components enclosed by '{' and '}', while that collection having no condition of their order; k represents an identifier of the media; i represents an identifier of a word regarded as a unit for forming the semantic quality; Φ0(+ + +) represents Pallet Chain Function which links the Pallets, which are components inside the (), which is a process to linearly induce semantic quality via Definite meaning-space, Event meaning-space and Equivalence meaning-space; T1(f) represents Scenario Function in a case where the kind of the media includes and file or Printouts as well; and P2(j), P3(j) and P4(j) respectively represent Action Vectors with a complementary logical structure when simulating on a computer the mechanism in the WO2 Pallet, the WO3 Pallet and the WO4 Pallet, respectively, then, the Scenario Function is expressed by the following:

$$T0 = \Phi 0(+ \{\Phi p\{\quad, L2(k,i), P2(j)\})k$$

$$+ \Phi p\{Y3(k,i), L3(k,i), P3(j), T1(f)\}$$

$$+ \{\Phi p\{Y4(k,i), L4(k,i), P4(j)\}\}k)$$

$$T1 (f) = \Phi 1 (\{\Phi p (rf,2) \{\quad, L2 (r,i), P2 (r,j), P2 (j)\}\} r$$

$$+ (\{\Phi p (rf,3) \{Y3 (r.i) , L3 (r,i) , L3 (f,i), P3 (j\}\} \}$$

$$+ \{\Phi p (fr,4) \{Y3 (f,i), L4 (f,j), P4 (f,j), P4 (3)\}\} f)$$

**87.** The processing apparatus as set forth in Claim 86,

wherein the Tense Control Vector (L2 (k,i): WO2 Homogeneity Vector) expressed by L2 (k,i) on WO2 Pallet, which has simulated the Definite meaning-space on a computer, comprises:

a first step to confirm whether a data code exists in a data field to be identified by the i belonging to self's pallet of media identified by the k;
a second step, when the data code exists in the data field in the first step, to set a pallet identifier corresponding to a processing route thereafter in case the word identified by the i relates to command, or to confirm whether the data code's attribute accords with a prescribed attribute in case the word is not related to command; and
a third step to initialize a flag indicating a refusal state of the second step when the second step is valid.

**88.** The processing apparatus as set forth in Claim 86,

wherein the Tense Control Vector (Y3 (k,i): WO3 Duplication Vector) expressed by Y3 (k,i) on WO3 Pallet, which has simulated the Event meaning-space on a computer, comprises:

a first step to confirm whether a data code exists in a data field to be identified by the i belonging to the WO2 Pallet of media identified by the k; and
a second step to duplicate, when the data code is present in the data field in the first step, the data code into a data field identified by the i belonging to the self Pallet of media identified by k.

**89.** The processing apparatus as set forth in Claim 86,

Wherein the Tense Control Vector (L3 (k,i): WO3 Homogeneity Vector) expressed by L3 (k,i) on WO3 Pallet, which has simulated the Event meaning-space on a computer, comprises:

a first step to confirm whether a data code exists in a data field to be identified by the i belonging to self Pallet of media identified by the k;
a second step, when the data code is not present in the data field in the first step, to generate self's semantic quality into a working data field identified by the i and belonging to the self's Pallet corresponding to a media identified by the k either by substituting from a data code existing in the data field identified by the i belonging to the other media or by calculating using a data code existing in the data field identified by an identifier which is not always the same as the i; and
a third step, when the second step has been completed, to judge whether to legitimate the assumed semantic quality, and when the judgment was made as legitimate, to set a flag indicating whether to restart assuming semantic quality only by duplicating the semantic quality in the working data field into the self's data field as well as by a data link in the other Tense Control Vector, and to initialize a flag indicating Refusal of the second step.

**90.** The processing apparatus as set forth in Claim 86,
Wherein the Tense control Vector (Y4 (k,i): WO4 Duplicate Vector) expressed by Y4 (k,i) on WO4 Pallet, which has simulated the Equivalence meaning-space on a computer, comprises:

a first step to confirm whether a data code exists in a data field to be identified by the i belonging to the WO2 Pallet of a media identified by the k;
a second step to duplicate, when the data code is present in the data field in the WO2 Pallet in the first step, the data code into the data field identified by the i belonging to self Pallet of a media identified by the k;
a third step to confirm, when the data code is not present in the data field in WO2 Pallet in the first step, whether a data code exists in a data field identified by the i belonging to the WO3 Pallet of a media identified by the k; and
a fourth step to duplicate, when the data code is present in the data field in the WO3 Pallet in the third step, the data code into the data field identified by the i belonging to the self Pallet of a media identified by the k.

**91.** The processing apparatus as set forth in Claim 86,
wherein the Tense Control Vector (L4(k,i): WO4 Homogeneity vector) expressed by L4(k,i) on WO4 Pallet, which has simulated the Equivalence meaning-space on a computer, comprises:

a first step to confirm whether a data code exists in a data field identified by the i belonging to the self pallet of a media identified by the k;
a second step to implement a concrete editing of the data code, when the data code is present in the data field in the first step; and
a third step to examine, when the concrete editing is refused in the second step, whether the attribute check of WO2 Homogeneity Vector is Refusal or whether the Self Creation of WO3 Homogeneity Vector is Refusal, and to determine the cause of the Refusal and implement the concrete editing of the cause of Refusal.

**92.** The processing apparatus as set forth in Claim 73,
wherein the first criterion program has a logical structure which enables:

(1) To duplicate the semantic quality of the word existing in the first domain in the multiple domains as a semantic quality of a word existing in the second domain in the multiple domains; and
(2) To induce semantic quality either by substituting or by calculating from a semantic quality of a word in a domain other than the first domain.

**93.** The processing apparatus as set forth in Claim 73,
Wherein, based on a mechanism in which semantic quality formed in Consciousness meaning-space in depths of consciousness is linearly and univocally inherited in Definite meaning-space, Event meaning-space and Equivalence meaning-space, and this inherited semantic quality Coupling in Natural meaning-space is recognized as a meaning, the Domain is either one of the followings:

WO2 Pallet which has simulated the Definite meaning-space on a computer;
WO3 Pallet which has simulated the Event meaning-space on a computer, or
WO4 Pallet which has simulated the Equivalence meaning-space on a computer.

**94.** The processing apparatus as set forth in Claim 73,
wherein the second criterion program put together, regardless of the processing order by words, Tense Control Vectors of a same kind, per each domain in the multiple domains.

**95.** (Amended) In the process device of Range of Claim 86,
wherein the third criterion program comprises:

A 1st step to determine send information to be displayed on Screen in a system;
A 2nd step to examine a data code in the data field in which an identifier of Pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;
A 9th step to activate WO3 Pallet or Pallet Chain Function of T1 when needed; and
A 10th step to repeat from the 1st step to the 9th step incessantly until the system is closed.

**96.** (Amended) The processing apparatus as set forth in Claim 80,
wherein the third criterion program comprises:

A 1st step to determine send information to be displayed on Screen in a system;
A 2nd step to examine a data code in the data field in which an identifier of pallet to be activated next is recorded;
A 3rd step to set all Pallets within the Synchronization range as an activation object when it is needed to return to a menu screen corresponding to the screen based on a result of the 2nd step;
A 4th step to initialize a corresponding data field when needed;
A 5th step to activate a corresponding WO4 Pallet;
A 6th step to send data code edited by the WO4 Pallet in the 5th step to a corresponding screen;
A 7th step to receive command and data code instructed on the corresponding screen;
An 8th step to activate a corresponding WO2 Pallet;
A 9th step to activate WO3 Pallet when needed;
A 10th step to repeat from the 1st step to the 9th step incessantly until the system is closed.

**97.** A software maintenance method for maintaining a software, the software being made by use of a Template program, the Template program comprising:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively; and
wherein the maintenance method comprises correcting or modifying not only the identifiers corresponding to the semantic quality obtaining subject and the media corresponding to the first to the third criterion programs, but also a calculation equation in the Tense Control Vector.

**98.** A software transplant method for transplanting a software, the software being made by use of a Template program, the Template program comprising:

A first criterion program (Tense Control Vector) to possess a prescribed first universal structure to realize semantic quality, regardless of the software's functionality, for every semantic quality belonging to media intervening a human and a first computer or a first OS on which a software to be produced operates, the first universal structure comprising a first undefined part to be filled with an identifier of the media and a second undefined part to be filled with another identifier of a subject obtaining the semantic quality existing on the media;

A second criterion program (Pallet Function) to possess a prescribed second universal structure to develop the first criterion program, regardless of the software's functionality, into multiple domains, the second universal structure containing the first and the second undefined parts; and

A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively; and

wherein the transplant method comprises transplanting a stage the first computer is operating on to a second computer or a second OS while keeping logical structures of the first to the third criterion programs.

**99.** A software management method for managing a software, the software being made by use of a Template program, the Template program comprising:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;

A second criterion program (Pallet Function) to possess a prescribed second universal structure to develop the first criterion program, regardless of the software's functionality, into multiple domains, the second universal structure containing the first and the second undefined parts; and

A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively; and

wherein the management method comprises managing the identifier of the semantic quality obtaining subject as well as of the media corresponding to the first to the third criterion programs while keep logical structures of the criterion programs.

**100.** A Homogeneity Map creation method for creating a Homogeneity Map, the Homogeneity Map having multiple domains placed thereon for every word of a software to be produced so as to satisfy a mechanism in which a semantic quality is formed in a Consciousness meaning-space in depths of consciousness is univocally inherited into a Definite meaning-space, an Event meaning-space and an Equivalent meaning-space, has turned into a Coupling in a Natural meaning-space, and is recognized as a meaning,

wherein the multiple domains contain criterion programs which process a common structure.

**101.** (Amended) The Homogeneity Map creation method as set forth in Claim 100,

wherein, when independent variable in Scenario Function which is an expression of the mechanism to induce from a certain meaning unique semantic quality that is on origin to form a meaning is Screen, File or Printouts as to media, and Word belonging to the screen, File or Printouts as to the semantic quality obtaining subject, multiple domains possess a first domain (WO4) to be an Interface with a human's recognition and to implement memorizing which is a root of the human's recognition, as well as a second domain (WO2) to accept the semantic quality of the word; and

wherein a route establishing the Synchronization is determined by a control word to be specified by a Screen between the first domain and the second domain in case the word exists on the Screen, whereas the route establishing the Synchronization is determined only by whether the semantic quality is present or not between the first domain and the second domain in case the word exists on the File or the Printouts.

**102.** (Amended) The Homogeneity Map creation method as set forth in Claim 100, wherein, when independent variable in Scenario Function which is an expression of the mechanism to induce from a certain meaning unique semantic quality that is on origin to form a meaning is File or Printouts as to media, and Word belonging to the File or Printouts as to the semantic quality obtaining subject, multiple domains possess a first domain (WO4) to implement recording of the semantic quality onto the File or Printouts corresponding to memorizing which is a root of human's recognition, as well as a second domain (WO2) for a reference to the File, which is corresponding to awakening the recorded semantic quality of the word; and

wherein a route establishing a Synchronization is determined by whether the semantic quality is present or not between the first domain and the second domain.

**103.** (Amended) The Homogeneity Map creation method as set forth in Claim 100, in case independent variable in Scenario Function which is an expression of the mechanism to induce from a certain meaning unique semantic quality that is on origin to form a meaning is Screen, File or Printouts as to media, and Word belonging to the screen, File or Printouts as to the semantic quality obtaining media, the method further comprising:

a step for placing, as multiple domains, a first domain (WO4) to be an Interface with a human's recognition and to implement memorizing which is a root of the human's recognition, as well as a second domain (WO2) to accept the semantic quality of the word;
a step for determining a route establishing the Synchronization by a control word to be specified by a Screen between the first domain and the second domain in case the word exists on the Screen; and
a step for determining the route establishing the Synchronization only by whether the semantic quality is present or not between the first domain and the second domain in case the word exists on the File or the Printouts.

**104.** A Tense Control Vector creation method for creating a Tense Control Vector by simulating a Scenario Function onto a computer space hypothetically recognizing a Definite meaning-space as W02 Pallet, an Event meaning-space as WO3 Pallet, and an Equivalent meaning-space as W04 Pallet,

wherein the Scenario Function is a functional expression of a mechanism in which semantic quality which has materialized in a Consciousness meaning-space existing in depths of consciousness is inherited univocally into Definite meaning-space, Event meaning-space and Equivalence meaning-space, and what is recognized as a meaning is a Coupling formed by the inherited semantic quality in a Natural meaning-space.

**105.** The Tense Control Vector creation method as set forth in Claim 104, wherein the materialization of the semantic quality in the WO2 Pallet is implemented by a logical structure comprising:

A first step to confirm whether data code does not exist in a data field identified by i belonging to a Self Pallet concerned with a media identified by k;
A second step, when the data code is present in the data field in the first step, implement either setting a following processing route in case a word identified by the i is related to command, or confirming whether an attribute of the data code is consistent with a prescribed one in case the word identifier by the i is other than related to command; and
A third step to initialize a flag indicating a Refusal state of the second step if the second step is Accepted.

**106.** The Tense Control Vector creation method as set forth in Claim 104,

wherein the inheritance of the semantic quality from the W02 Pallet to the W03 Pallet is implemented by a logical structure comprising:

A first step to confirm whether a data code does not exist in a data field identified by i belonging to the W02 Pallet concerned with a media identified by k; and
A second step to, when the data code is present in the data field in the first step, duplicate the data code into the data field identified by the i belonging to a Self Pallet concerned with the media identified by the k.

**107.** (Amended) The Tense Control Vector creation method as set forth in Claim 104,

wherein the materialization of the semantic quality in the WO3 Pallet is implemented by a logical structure comprising:

A first step to confirm whether a data code does not exist in a data field identified by i belonging to a Self Pallet concerned with a media identified by k;
A second step to, when the data code is not present in the data field in the first step, generate Self semantic quality into a working data field identified by the i belonging to the Self Pallet concerned with the media identified by the k by substituting or calculating from data code existing in the other data field; and
A third step to duplicate the semantic quality in the working data field into a Self data field, to set a flag indicating Restart or Not of a semantic quality embodiment only by combining data in the other Tense Control Vector, and to initialize a flag indicating a Refusal state of the second step, when a result of the second step is Accepted.

**108.** The Tense Control Vector creation method as set forth in Claim 104, wherein the inheritance of the semantic quality from the WO3 Pallet to the WO4 Pallet is implemented by a logical structure comprising:

A first step to confirm whether a data code does not exist in a data field identified by i belonging to the W02 Pallet concerned with a media identified by k;
A second step to, when the data code is present in the data field concerned with the W02 Pallet in the first step, duplicate the data code into a data field identified by the i belonging to a Self Pallet concerned with the media identified by the k;
A third step to, when the data code is not present in the data field in the first step, confirm whether a data code is not present in a data field identified by the i belonging to the W03 Pallet concerned with a media identified by the k in the third step; and
A fourth step to, when the data code is present in the data field concerned with the WO3 Pallet in the third step, duplicate the data code into a data field identified by the i belonging to a Self Pallet concerned with media identified by the k.

**109.** The Tense Control Vector creation method as set forth in Claim 104, wherein the materialization of the semantic quality in the WO4 is implemented by a logical structure comprising:

A first step to confirm whether a data code does not exist in a data field identified by i belonging to a Self Pallet concerned with a media identified by k;
A second step to, when the data code is present in the data field in the first step, embody and edit the data code; and
A third step, when the embodiment and editing is Refused in the second step, investigate if an attribute check of the W02 Homogeneity Vector is Refused or Self Creation of the W03 Homogeneity Vector is Refused, to determine a cause of the Refusal, and to embody and edit the cause of Refusal.

**110.** A Pallet Function creation method for creating a Pallet Function, the method comprising placing a software to be produced onto a Pallet with three domains by appropriately selecting:

a 1st program (Homogeneity Vector) to establish semantic quality to word for every word in the software;
a 2nd program (Duplication Vector) to combine word's semantic quality between Pallets; and
a 3rd program (Action Vector) to execute various actions corresponding to the software.

**111.** (Amended) A processing apparatus which operates an object program, the object program comprising the first, the second, and the third programs placed by the method as set forth in Claim 110, wherein the order of placement of the first, the second, and the third programs onto the Pallet as well as the order between words in each of the programs are on a free basis.

**112.** (Amended) A recording medium on which an object program is recorded, the object program comprising the first, the second, and the third programs placed by the method as set forth in Claim 110, wherein the order of placement of the first, the second, and the third programs onto the Pallet as well as the order between words in each of the programs are on a free basis.

**113.** A processing apparatus which operates an object program, the object program comprising the first, the second, and the third programs placed by the method as set forth in Claim 110,
wherein the placement of the first, the second, and the third programs based on the method can be controlled by ignoring the order in terms of words inside each of the first, the second, and the third programs.

**114.** A recording medium on which an object program is recorded, the object program comprising the first, the second, and the third programs placed by the method as set forth in Claim 110, wherein the placement of the first, the second, and the third programs based on the method can be controlled by ignoring the order in terms of words inside each of the first, the second, and the third programs.

**115.** A processing apparatus which operates an object program, the object program comprising the first, the second, and the third programs placed by the method as set forth in Claim 110,
wherein in the boundary of the first, the second, and the third programs based on the method and the existing software, the parameter is communicable via a separate and original field, other than that corresponding to words of the first, the second, and the third programs.

**116.** A recording medium on which an object program is recorded, the object program comprising the first, the second, and the third programs placed by the method as set forth in Claim 110, wherein in the boundary of the first, the second, and the third programs based on the method and the existing software, the parameter is communicable via a separate and original field, other than that corresponding to words of the first, the second, and the third programs.

**117.** A Pallet area determination method for determining a Pallet are, comprising:

preparing the area for every word specified by the Pallet Function creation method as set forth in Claim 110; and taking the area as a global area, commonly shared by the Pallets.

**118.** A Pallet Chain Function creation method for creating a Pallet Chain Function, the Pallet Chain Function operating, in order, a 1st Pallet (W04), a 2nd Pallet (W02) and a 3rd Pallet (W03), the 1st program being for inducing word's semantic quality for every word in a software to be produced, the 2nd program being for combining the semantic quality of the word between domains, the 3rd program being for executing various actions corresponding to the software, the creation method designates:

The first Pallet (WO4) as being for specific editing of the semantic quality of and object word;
The second Pallet (WO2) as being for receiving instructions based on human recognition of the object word; and
The third Pallet (WO3) as being for establishing the semantic quality of the word.

**119.** A processing apparatus which operates and object program, the object program comprising the first Pallet (WO4), the second Pallet (WO2), and the third Pallet (WO3) operated by the method as set forth in Claim 118,
wherein upon the movement of the first Pallet (WO4), the second Pallet (WO2), and the third Pallet (WO3) based on the method, the moving operation is made by autonomously controlling programs so as to satisfy a synchronization structure.

**120.** A recording medium on which an object program is recorded, the object program comprising the first Pallet (WO4), the second Pallet (WO2), and the third Pallet (WO3) operated by the method as set forth in Claim 118,
wherein upon the movement of the first Pallet (WO4), the second Pallet (WO2), and the third Pallet (WO3) based on the method, the moving operation is made by autonomously controlling programs so as to satisfy a synchronization structure.

**121.** A processing apparatus which operates and object program, the object program comprising the first Pallet (WO4), the second Pallet (WO2), and the third Pallet (WO3) operated by the method as set forth in Claim 118,
wherein the object program controls a parameter by using an independent field other than a field concerned with a word in the Pallet Chain Function, in a boundary between the Pallet Chain Function and an existing software.

**122.** A recording medium on which an object program is recorded, the object program comprising the first Pallet (WO4), the second Pallet (WO2), and the third Pallet (WO3) operated by the method as set forth in Claim 118,
wherein the object program controls a parameter by using an independent field other than a field concerned with a word in the Pallet Chain Function, in a boundary between the Pallet Chain Function and an existing software.

**123.** A Duplication Vector creation method for creating a Duplication Vector, the method comprising developing a software to be produced onto Pallets being three domains, the Duplication Vector duplicating the first Pallet's semantic quality of an object word to the second Pallet corresponding to the word in order to combine the word's semantic quality between the Pallets for every word.

**124.** A Homogeneity Vector creation method for creating a Homogeneity Vector, the method comprising developing a software to be produced onto Pallets being three domains, the Homogeneity Vector induces semantic quality for every word corresponding to the software.

**125.** The Homogeneity Vector creation method as set forth in Claim 124,
wherein on operation of a program of an object ward is autonomous without a sequence of a processing between words.

**126.** An Action Vector creation method for creating an Action Vector, the method comprising developing a software to be produced onto Pallets being three domains, the Action Vector implementing a variety of actions concerned with the software for every word corresponding the software.

**127.** The Action Vector creation method as set forth in Claim 126,
wherein the Action Vector has a Routing action to determine Process Route concerned with the software.

**128.** The Action Vector creation method as set forth in Claim 126,
wherein the Action Vector has a Command action to implement the direction to OS concerned with the software.

**129.** The Action Vector creation method as set forth in Claim 126,
wherein the Action Vector has a Structural action to initialize the area concerned with the software so as to make the software have a structure based on Lyee.

**130.** The Action Vector creation method as set forth in Claim 126,
wherein the Action Vector has a an Operation action to implement semantic quality check. needed for requirements concerned with the software.

**131.** The Action Vector creation method as set forth in Claim 126,
wherein the variety of actions to be an object are autonomous without a sequence of a process between actions.

**132.** A processing apparatus for operating a development support tool program, the development support tool program comprising automatically generating a source code corresponding to a 4$^{th}$ program, the 4$^{th}$ program appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein the development support tool program automatically generates the source code of the 4th programs by defining an identifier of the word and condition on which the semantic quality is established.

**133.** A recording medium on which a development support tool program is recorded, the development support tool program comprising automatically generating a source code corresponding to a 4$^{th}$ program, the 4$^{th}$ program appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein the development support tool program automatically generates the source code of the 4th programs by defining an identifier of the word and condition on which the semantic quality is established.

**134.** A processing apparatus for operating a maintenance support tool program, the maintenance support tool program comprising maintaining a $4^{th}$ program, the $4^{th}$ program appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein the maintenance support tool program univocally specifies a related software by designating addition or modification of items corresponding to the software.

**135.** A recording medium on which a maintenance support tool program is recorded, the maintenance support tool program comprising maintaining a $4^{th}$ program, the $4^{th}$ program appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein the maintenance support tool program univocally specifies a related software by designating addition or modification of items corresponding to the software.

**136.** (Amended) A processing apparatus for operating a management support tool program, the management support tool program comprising managing a $4^{th}$ program, the $4^{th}$ program appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein the management support tool program manages the number of the programs and their situation.

**137.** (Amended) A recording medium on which a management support tool program is recorded, the management support tool program comprising managing a $4^{th}$ program, the $4^{th}$ program appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein the management support tool program manages the number of the programs and their situation.

**138.** A software loading method for loading a software to be created, the software being made by appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein the software made is loaded onto an actual machine implementing a maximum adjustment (tuning).

**139.** The software loading method as set forth in Claim 132, wherein the maximum adjustment is in terms of an integration of a memory concerned with the actual machine.

**140.** The software loading method as set forth in Claim 132, wherein the maximum adjustment is in terms of an integration of a processing time in the actual machine.

**141.** A software development method for developing a software, the software made by appropriately selecting and placing, onto Pallets being three domains, for every word in a software to be produced, the following programs:

a 1st program to induce semantic quality to the word;
a 2nd program to combine the word's semantic quality between Pallets; and
a 3rd program to execute various actions corresponding to the software,

wherein a structure of Definitive the word belongs to, a process route corresponding to the software, and each of the words' Self Creation conditions are defined by defining them into a word table corresponding to the word.

**142.** The software development method as set forth in Claim 141,
wherein the determination of a structure of Definitive to which words belong, process route of the software, and the Self Creation requirement of each of the words can be implemented by a parallel work method in that the words are independent from each other.

**143.** The software development method as set forth in Claim 141,
wherein the determination of a structure of Definitive to which words belong, process route of the software, and the Self Creation requirement of each of the words can eliminate arbitrariness and reduce development steps in that the determination can be accomplished only by being applied to a prescribed structure, thus not requiring mental ability and design.

**144.** A software maintenance method for maintaining a software, the method comprising:

determining identifier of Definitive to which words of the software belong and of the words; and
substituting the identifiers to Scenario Function which is a universal structure regulating a software, in order for the software to be univocally determined.

**145.** A software transplanting method for transplanting an existing software to a software regulatable by Lyee, the method comprising:

extracting identifiers of Definitive to which words of the software belong and elements determining processing routes;
determining a Homogeneity Map representing the process; and
substituting those into Scenario Function which is a universal structure regulating a software in order for a prescribed software to be univocally determined.

**146.** The software transplanting method as set forth in Claim 145,
wherein the existing software is a source code produced by the traditional program creation method.

**147.** A Homogeneity Map creation method for creating a Homogeneity Map , the Homogeneity Map being obtained by placing multiple domains containing criterion program that possess common structure for every word of the software, the method mapping elements that determine process routes thereon, the elements being extracted from the existing software specified in the software transplanting method as set forth in Claim 145.

**148.** A data structure replacement method for replacing a data structure, the data structure concerned with an existing software, the method comprising:

determining Definitives to which words belong, the words being extracted from the existing software specified in the software transplanting method as set forth in Claim 145; and
replacing the data structure concerned with the existing software into a data structure suitable to the criterion program which possesses a common structure for every word in the software.

**149.** A data value replacement method for replacing a data value, the data value concerned with an existing software, the method comprising:

determining definitives to which words belong the words being extracted from the existing software specified in the software transplanting method as set forth in Claim 145; and
replacing the data value concerned with the existing software into a data value on a data structure suitable to the criterion program which possesses a common structure for every word in the software.

**150.** An existing program analyzing method for analyzing an existing program, the method comprising taking a premise of converting a multiple-layer program of the existing software into a single-layer program, the exiting software specified in the software transplanting method as set forth in Claim 145.

**151.** The software transplanting method as set forth in Claim 145,
wherein the transplanting can be realized by running in parallel the existing software and the software realized after the transplanting.

**152.** The software transplanting method as set forth in Claim 151,
wherein computers on which software before and after the transplanting operates can be different.

**153.** A software development management method for managing a software development, the method using an algorithm which creates the software to be produced by appropriately selecting and placing, onto Pallets being three domains, for every word in the software to be produced, the followings:

a 1st program to establish semantic quality to the word;
a 2nd programs to combine the word's semantic quality between Pallets; and
a 3rd program to execute various actions corresponding to the software.

**154.** The software development management method as set forth in Claim 153, the method comprising combining the algorithm and an application of Scenario Function, which is a universal structure regulating all software in order to realize a univocal method in terms of a software development management method.

**155.** The software development management method as set forth in Claim 153, the method comprising applying the algorithm and the Scenario Function, which is a universal structure regulating software in order for the software to be made structurally universal.

**156.** A software operational management method for managing a software operation, the method using an algorithm in order to univocally obtain a requested software even in a modification of a specification corresponding to the software, the algorithm appropriately selecting and positioning, onto a pallets being three domains, for every word in the software to be produced, the followings:

a 1st program to establish semantic quality to the word;
a 2nd programs to combine the word's semantic quality between Pallets; and
a 3rd program to execute various actions corresponding to the software,

wherein a required software can also be univocally obtained in specification modification of the software.

**157.** The software operational management method as set forth in Claim 156, the method comprising applying the algorithm and the Scenario Function, which is a universal structure regulating software in order for the software to be made structurally universal.

**158.** A parallel computer realized as LSI from an algorithm, the algorithm appropriately selecting and placing, onto Pallets being three domains, for every word in the software to be produced, the followings:

a 1st program to establish semantic quality to the word;
a 2nd programs to combine the word's semantic quality between Pallets; and
a 3rd program to execute various actions corresponding to the software,

wherein each of the Pallets is made into a logical unit corresponding to the LSI.

**159.** The parallel computer as set forth in Claim 158,
wherein Pallet Function and Pallet Chain Function are realized as LSI made into logical units, the Pallet Function placing the 1st to 3rd programs onto the Pallet by appropriately selecting them, the Pallet Chain Function operating the first Pallet (WO4), the second Pallet (WO2) and the third Pallet (WO3), on which these 1st to 3rd programs are appropriately placed.

**160.** (Amended) A judgment assisting apparatus, comprising presenting the number of Word's Unit-Links concerned with the software as information for solving a subject to be solved

**161.** The software determination method as set forth in Claim 1,
wherein the criterion program contains an order rule into programs for every word.

**162.** The software usage method as set forth in Claim 25,
wherein the criterion program contains an order rule into programs for every word.

**163.** A File determination method for determining a File, comprising:

a step to extract both a medium actualized from language materialized by a software requester as a development requirement and a word, which is a unit of establishing semantic quality existing on the medium;
a step to define respective identifiers to the extracted medium and to the word; and
a step, by attaching regularly determined identifiers to the identifiers of the defined medium and the word, to induce and to define a file corresponding to the medium and a data area related to the word on the file as files needed to realize the software,

wherein the software is univocally obtained by substituting the defined identifiers of the file and the words on the file into independent variable parts of a Scenario Function which functionally expresses a mechanism to induce from a data code the univocal semantic quality assumed on the data code.

**164.** A Homogeneity Map creation method for creating a Homogeneity Map, the Homogeneity Map being a diagram visualizing Scenario Function that makes functional expression of providence of existence, the providence of existence being a mechanism to induce from a certain meaning a univocal semantic quality which is an origin of forming the meaning via multiple domains,
**characterized in that** when independent variables of the Scenario Function are the Screen, File or Printouts as to media, and are words belonging to the Screen, File or Printouts as to a semantic quality obtaining media, the corresponding multiple domains comprise:

a $1^{st}$ area (W04) to interface with human recognition as well as implement memorization which is a root of the human recognition;
a $2^{nd}$ area (W02) to accept the word's semantic quality; and
a $3^{rd}$ area (W03) to establish semantic quality of the accepted word significance,

wherein the $3^{rd}$ area (W03), when whether establishing method of the word's semantic quality is irreversible as the providence of existence say or reversible contrary to the providence of existence is clear, is separated as W02G Pallet in the former case and as W04P Pallet in the latter case.

**165.** (Amended) The Homogeneity Map creation method as set forth in Claim 154,
wherein the W03 Homogeneity Vector specifies that:

the Vectors of data input words belonging to media (k) such as Screen be mounted on W02G Pallet as LG3(k, i);
the Vector of input/output words corresponding to data output belonging to media (k) such as Screen be mounted on W04P Pallet, as Duplication Vector Type Homogeneity-Vector (LY3(k, i));
the Vectors of data output words be mounted on W04 Pallet as LP3(k, i); and
the Vector of boundary words located in the boundary of T0 and T1 be mounted on W04P Pallet as R-type Duplication Vector(LR3(b, i)), respectively.

**166.** A software development business method, comprising:

a step for extracting words in natural language from a software development requirement possessed by clients;
a step for defining Definitive identifiers and word identifiers corresponding to the extracted words in accordance with Lyee methodology and for registering the defined identifiers to a tool related to the Lyee methodology, the Lyee methodology determining aimed software univocally by applying Scenario Function which functionally expresses a mechanism in which semantic quality established in the Consciousness meaning-space in the depths of consciousness, is univocally handed over through Definite meaning-space, Event meaning-space and Equivalence meaning-space;
a step for automatically generating the software by use of the tool;

a step for automatically generating the software by the tool, in case defining operational requirement is judged to be necessary as a result of the automatic generation, after requesting the client to define the operational requirement and reflecting the operational requirement presented by the client onto the tool;and
a step for delivering the generated software to the client.

**167.** A software univocal determination method for univocally determining a software, comprising:

grasping a providence of existence as a philosophical proposition, the proposition regulating a semantic quality established in Consciousness meaning-space in depths of consciousness being led to human recognition; and
substituting applicable identifiers to undefined parts of Scenario Function so as to univocally determine the software, the Scenario Function being a universal model devised combining the philosophical proposition with a set theory.

**168.** A software univocal determination method for univocally determining a software, comprising:

reconstructing a providence of existence in terms of a set theory, the providence regulating a semantic quality established in Consciousness meaning-space in depths of consciousness being led to human recognition; and
substituting applicable identifiers to undefined parts of Scenario Function so as to univocally determine the software, the Scenario Function being made into an algorithm by use of three dimensional spatial model.

**169.** A consciousness model devising method for devising a consciousness model, comprising:

grasping a consciousness structure existing in depths of consciousness as a philosophical proposition;
combining the philosophical proposition with a set theory to devise a functional expression; and
using a consciousness model purposing to obtain a solution of the function to obtain a TRUE solution for the philosophical. proposition.

**170.** An algorithm devising method for devising an algorithm, comprising:

grasping a consciousness structure existing in depths of consciousness as a philosophical proposition;
devising a universal Consciousness Model by combining the philosophical proposition with a set theory;
making the universal Consciousness Model into an algorithm by using Three-Dimension Spatial Model; and
obtaining a TRUE solution of the philosophical proposition by using the algorithm.

**171.** A software univocal determination method for univocally determining a software, comprising:

grasping a consciousness structure in depths of consciousness as a philosophical proposition;
devising a universal Consciousness Model by combining the philosophical proposition with a set theory; and
devising an algorithm by use of Three-Dimension Spatial Model against the devised universal Consciousness Model to make a Scenario Function including undefined part in it into another algorithm,

wherein the software is univocally determined by substituting an appropriate identifier into the. undefined part of the Scenario Funciton.

**172.** A program product comprising, as its constituent programs:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively.

**173.** A transmission wave, the wave making programs be actualized as corresponding functions by a computer on which the programs are installed, the programs specified as:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively.

**174.** A paradigm based program, having a function to realize programs as accorded with a program, the program specified as:

A first criterion program (Tense Control Vector) to possess a prescribed first universal structure to realize semantic quality, regardless of the software's functionality, for every semantic quality belonging to media intervening a human and a computer on which a software to be produced operates, the first universal structure comprising a first undefined part to be filled with an identifier of the media and a second undefined part to be filled with another identifier of a subject obtaining the semantic quality existing on the media;
A second criterion program (Pallet Function) to possess a prescribed second universal structure to develop the first criterion program, regardless of the software's functionality, into multiple domains, the second universal structure containing the first and the second undefined parts; and
A third criterion program (Pallet Chain Function) to possess a prescribed third universal structure to chain the first and the second criterion programs for every unit of the semantic quality and for every said medium so as to establish the semantic quality synchronously, regardless of the software's functionality, the third universal structure comprising the first and the second undefined parts,

wherein the software is univocally determined by substituting identifiers both of media derived from development requirement of the software to be realized and of the subject obtaining the semantic quality belonging to the media into the first and the second undefined parts, respectively; and
wherein the paradigm gives the predetermined universal structure.

FIG. 1

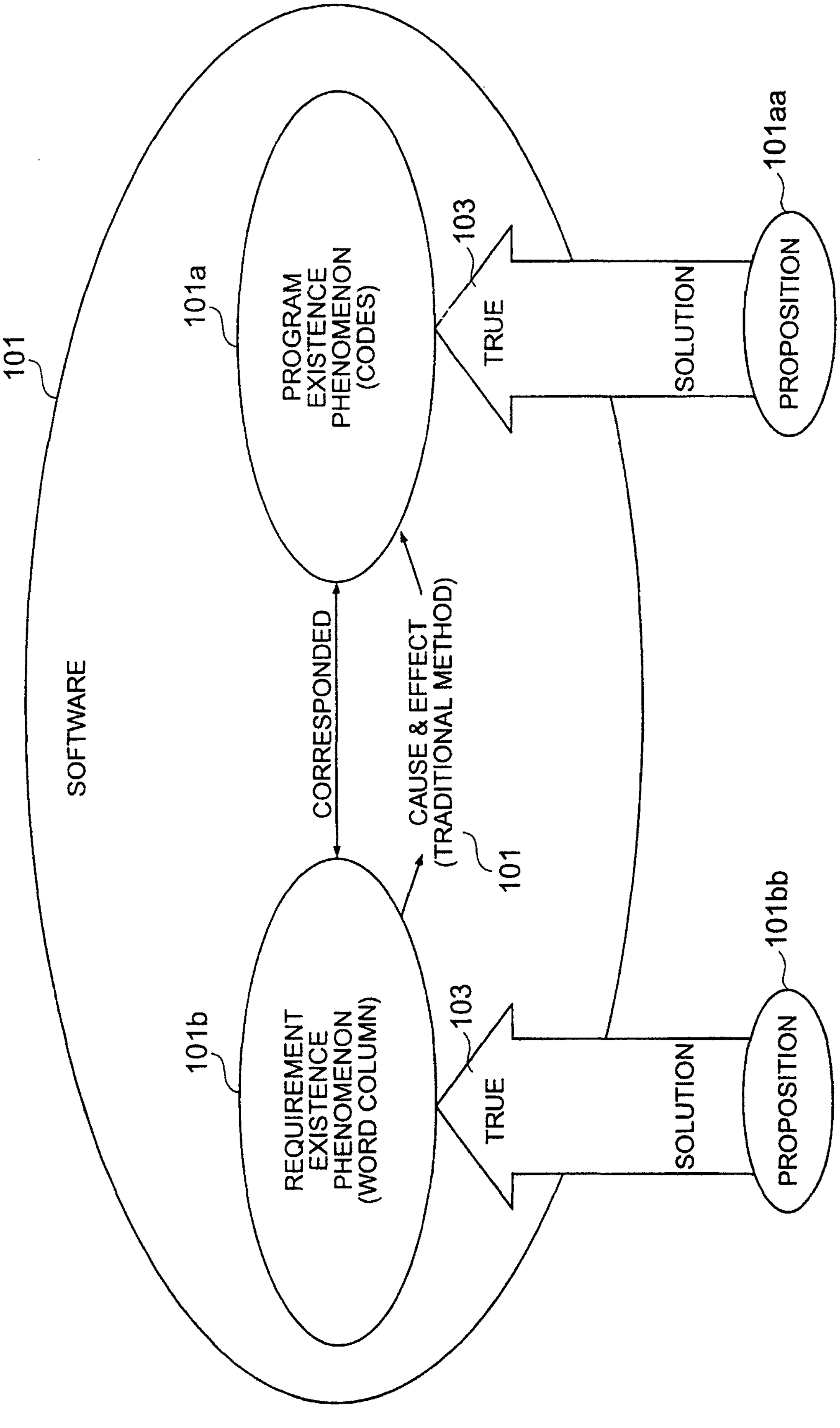
SOFTWARE
101
101a
PROGRAM
EXISTENCE
PHENOMENON
(CODES)
101b
REQUIREMENT
EXISTENCE
PHENOMENON
(WORD COLUMN)
CORRESPONDED
CAUSE & EFFECT
(TRADITIONAL METHOD)
101
103
TRUE
SOLUTION
PROPOSITION
101aa
103
TRUE
SOLUTION
PROPOSITION
101bb

FIG. 2

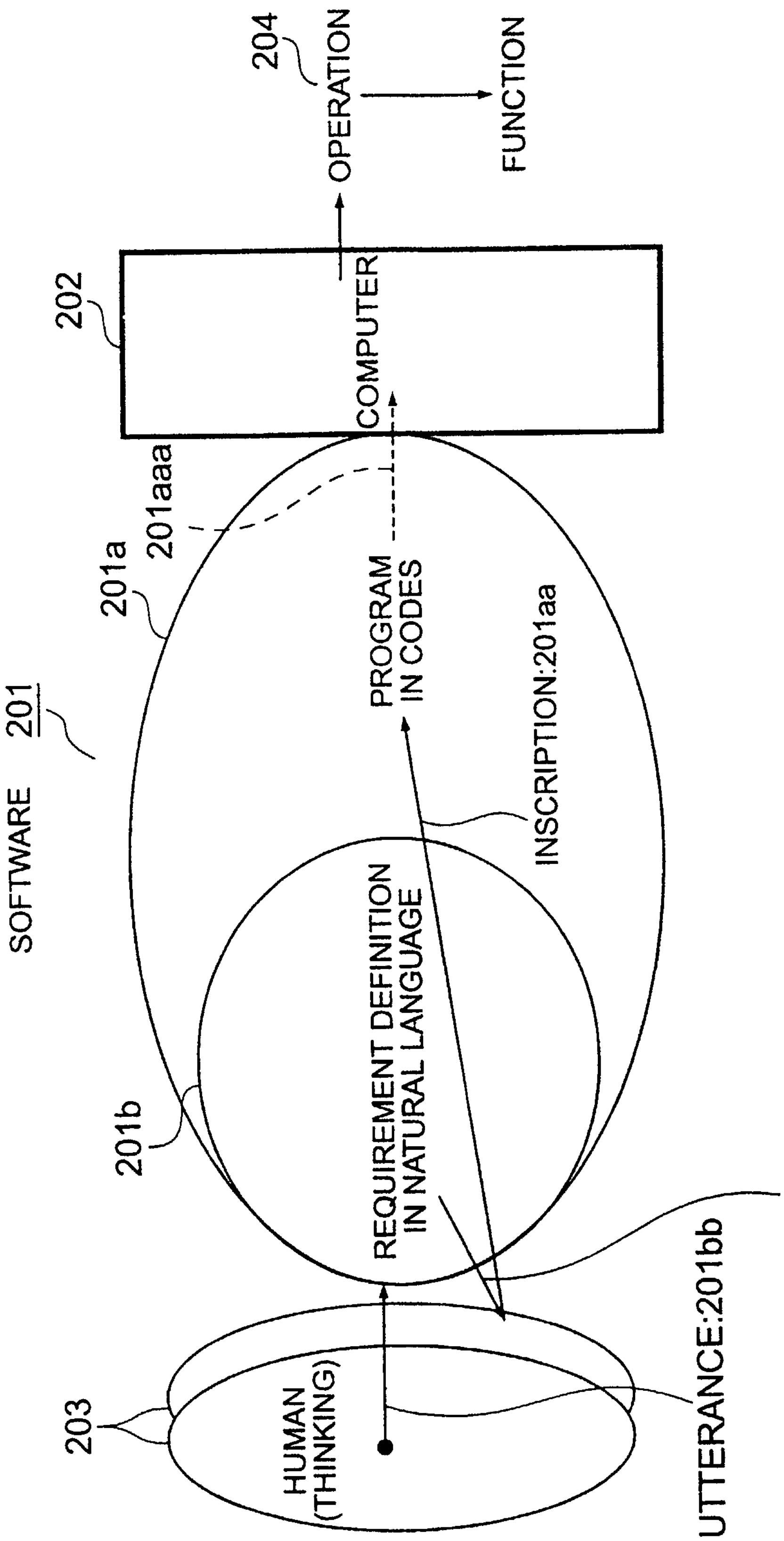
SOFTWARE 201
201a
201aaa
202
204
OPERATION
FUNCTION
COMPUTER
PROGRAM
IN CODES
INSCRIPTION:201aa
REQUIREMENT DEFINITION
IN NATURAL LANGUAGE
201b
201bbb
UTTERANCE:201bb
203
HUMAN
(THINKING)

FIG. 3

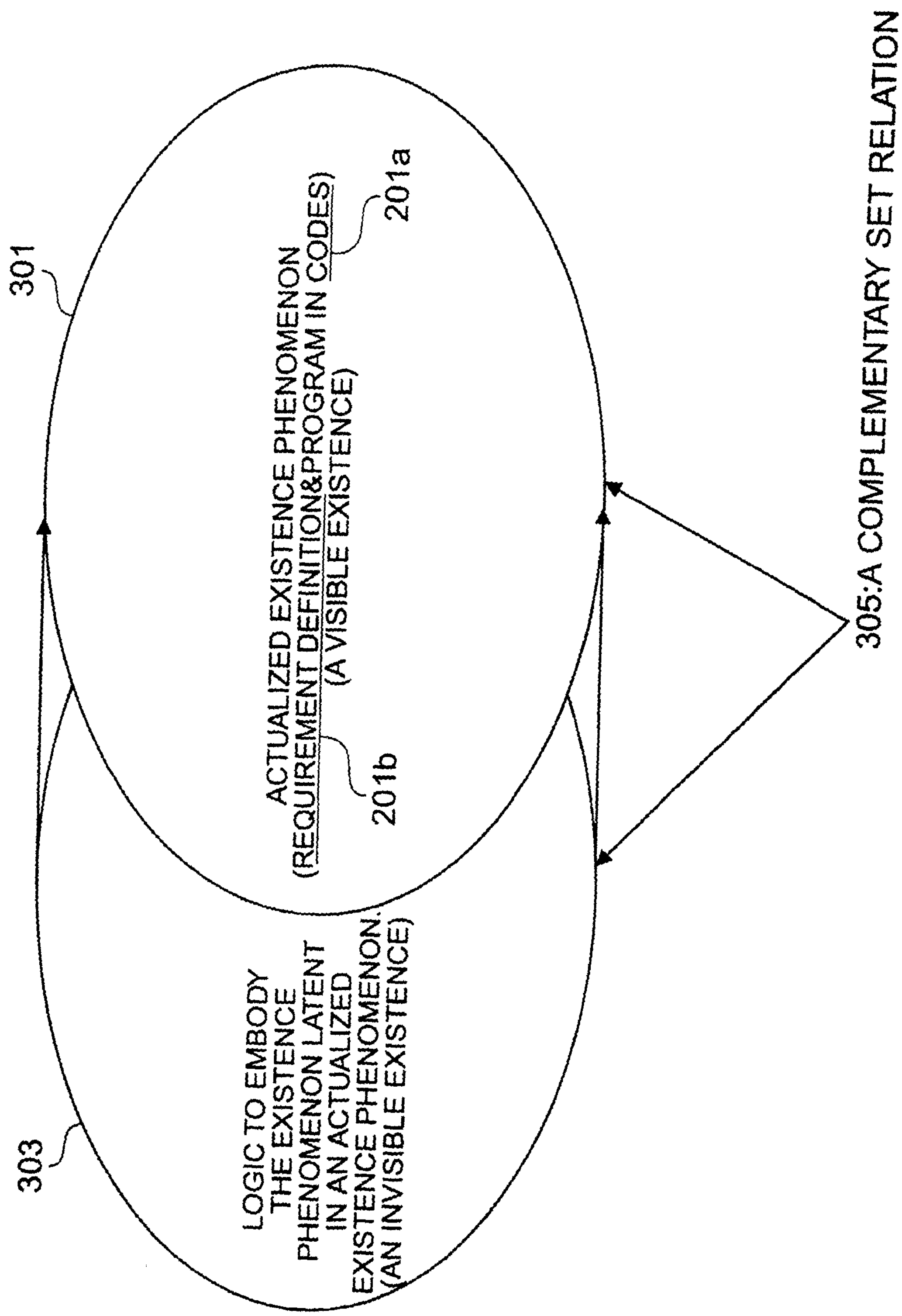
301
ACTUALIZED EXISTENCE PHENOMENON
(REQUIREMENT DEFINITION&PROGRAM IN CODES)
(A VISIBLE EXISTENCE)
201a
201b
303
LOGIC TO EMBODY
THE EXISTENCE
PHENOMENON LATENT
IN AN ACTUALIZED
EXISTENCE PHENOMENON.
(AN INVISIBLE EXISTENCE)
305:A COMPLEMENTARY SET RELATION

FIG. 4

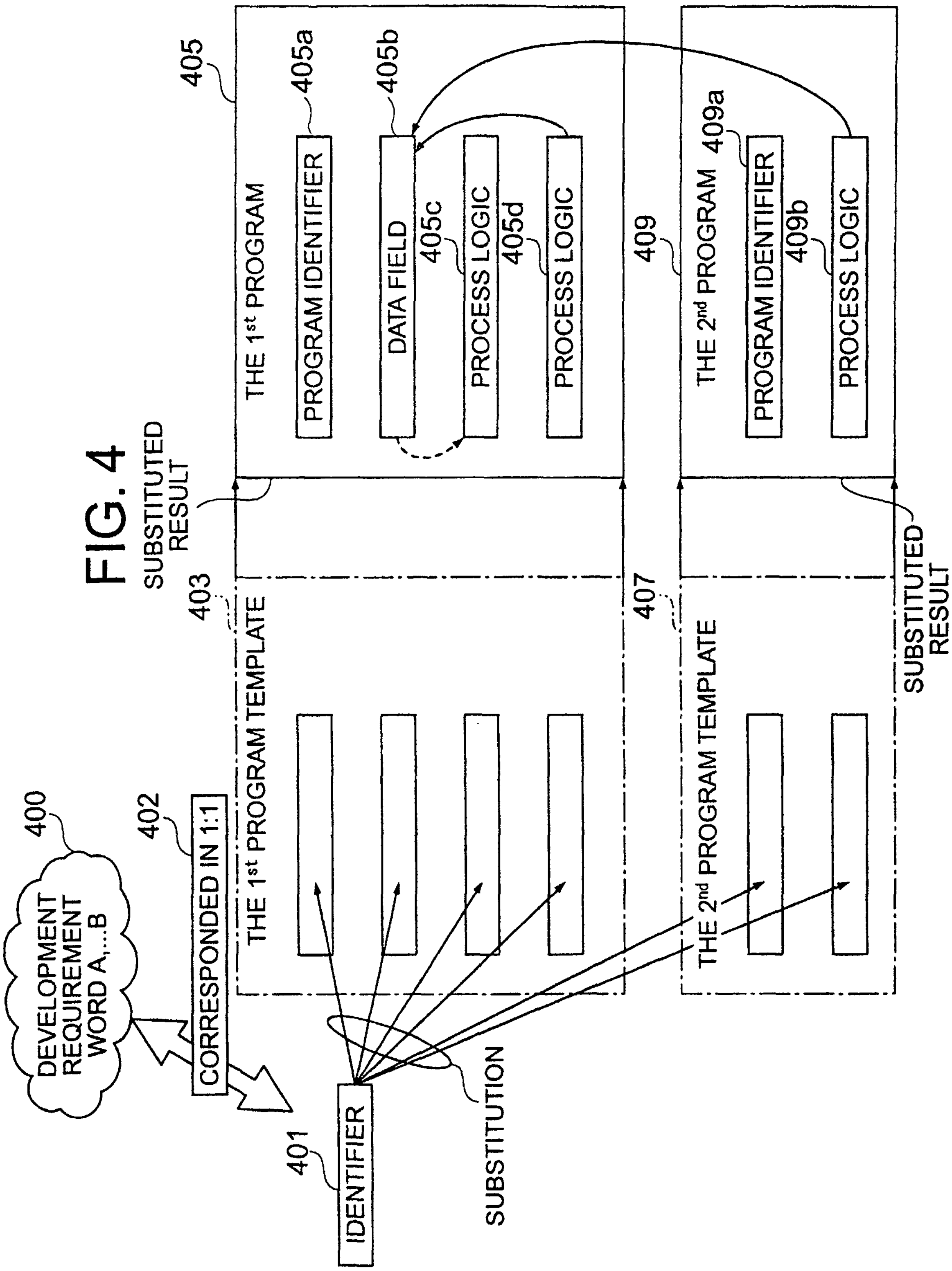
400
DEVELOPMENT REQUIREMENT WORD A,...B
402
CORRESPONDED IN 1:1
401
IDENTIFIER
SUBSTITUTION
403
THE 1st PROGRAM TEMPLATE
407
THE 2nd PROGRAM TEMPLATE
SUBSTITUTED RESULT
SUBSTITUTED RESULT
405
THE 1st PROGRAM
405a
PROGRAM IDENTIFIER
405b
DATA FIELD
405c
PROCESS LOGIC
405d
PROCESS LOGIC
409
THE 2nd PROGRAM
409a
PROGRAM IDENTIFIER
409b
PROCESS LOGIC

# FIG. 5

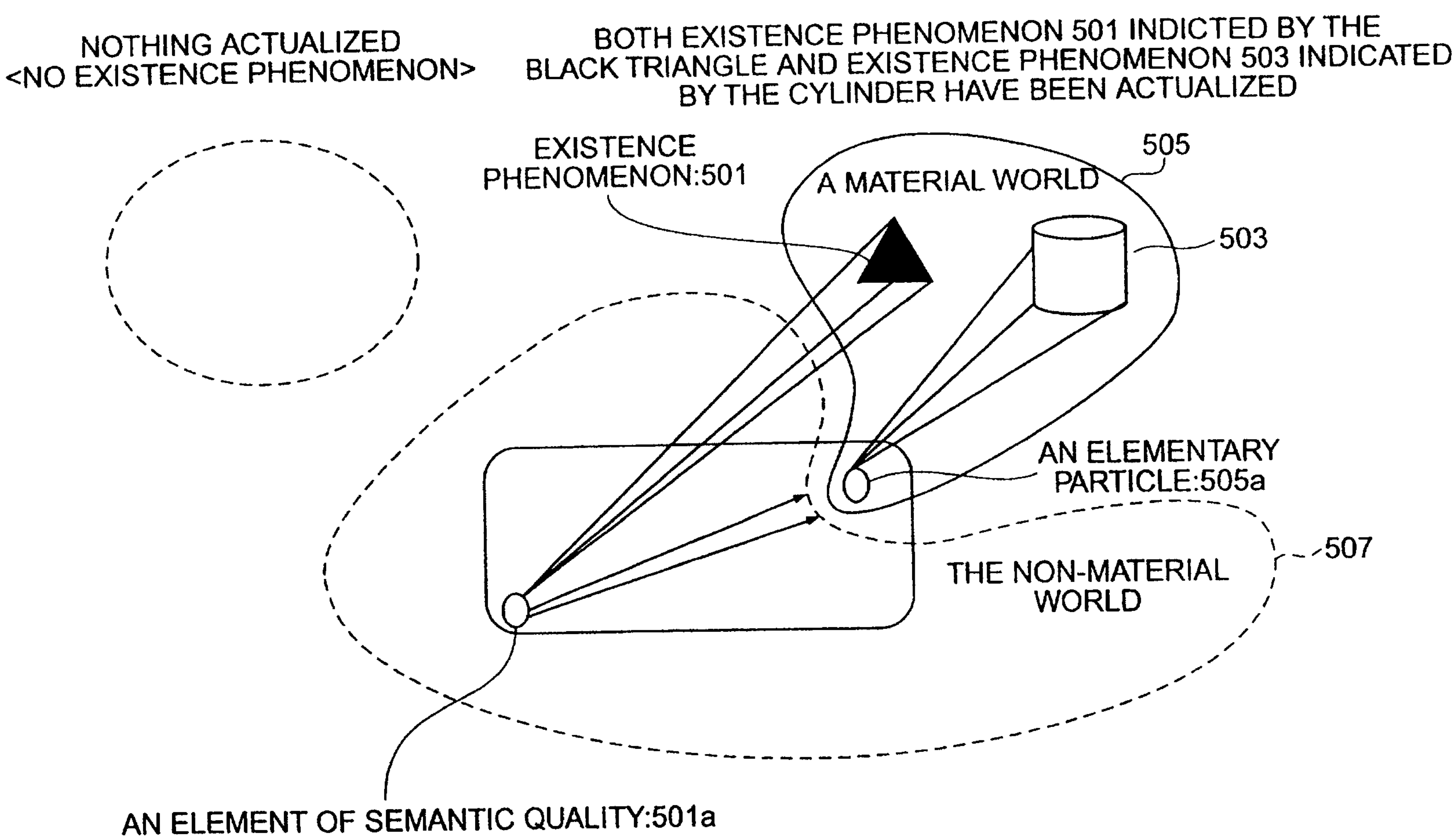

NOTHING ACTUALIZED
<NO EXISTENCE PHENOMENON>
BOTH EXISTENCE PHENOMENON 501 INDICTED BY THE BLACK TRIANGLE AND EXISTENCE PHENOMENON 503 INDICATED BY THE CYLINDER HAVE BEEN ACTUALIZED
EXISTENCE PHENOMENON:501
A MATERIAL WORLD
505
503
AN ELEMENTARY PARTICLE:505a
507
THE NON-MATERIAL WORLD
AN ELEMENT OF SEMANTIC QUALITY:501a

FIG. 6

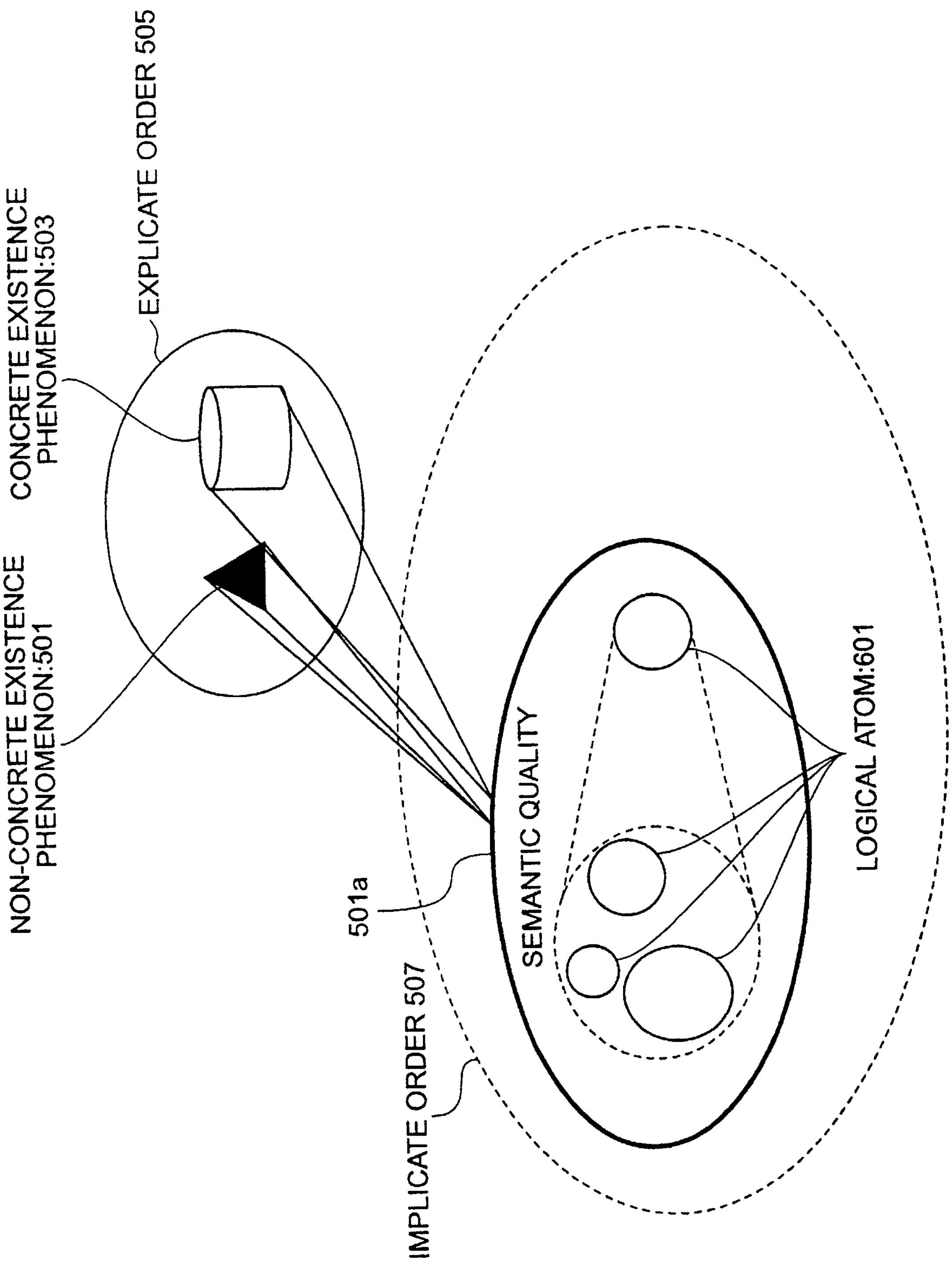
EXPLICATE ORDER 505
CONCRETE EXISTENCE PHENOMENON:503
NON-CONCRETE EXISTENCE PHENOMENON:501
501a
SEMANTIC QUALITY
LOGICAL ATOM:601
IMPLICATE ORDER 507

FIG. 7

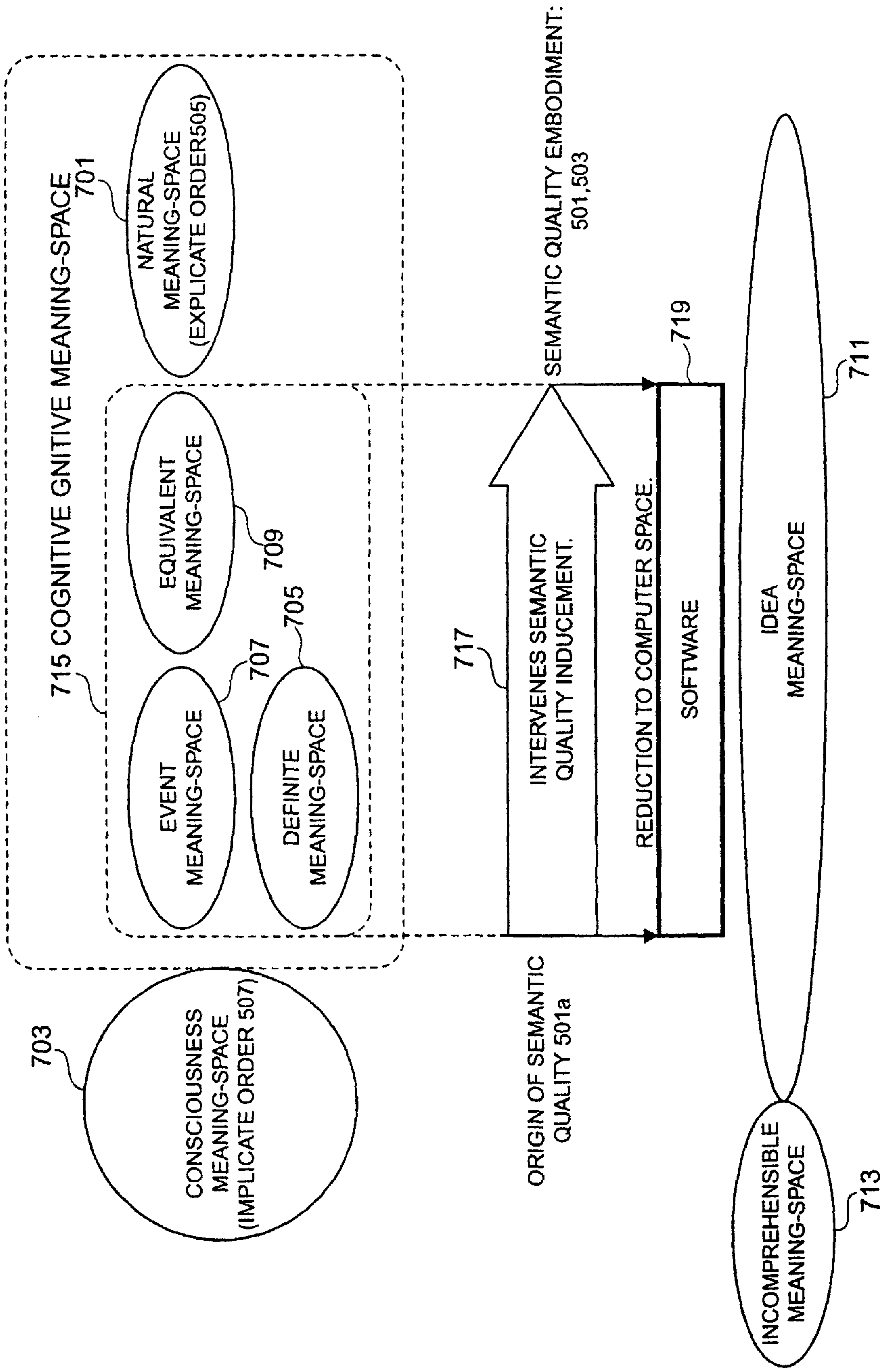
715 COGNITIVE GNITIVE MEANING-SPACE
701
NATURAL MEANING-SPACE (EXPLICATE ORDER505)
EVENT MEANING-SPACE
707
EQUIVALENT MEANING-SPACE
709
DEFINITE MEANING-SPACE
705
703
CONSCIOUSNESS MEANING-SPACE (IMPLICATE ORDER 507)
717
INTERVENES SEMANTIC QUALITY INDUCEMENT.
REDUCTION TO COMPUTER SPACE.
SEMANTIC QUALITY EMBODIMENT: 501,503
ORIGIN OF SEMANTIC QUALITY 501a
719
SOFTWARE
IDEA MEANING-SPACE
711
INCOMPREHENSIBLE MEANING-SPACE
713

# FIG. 8

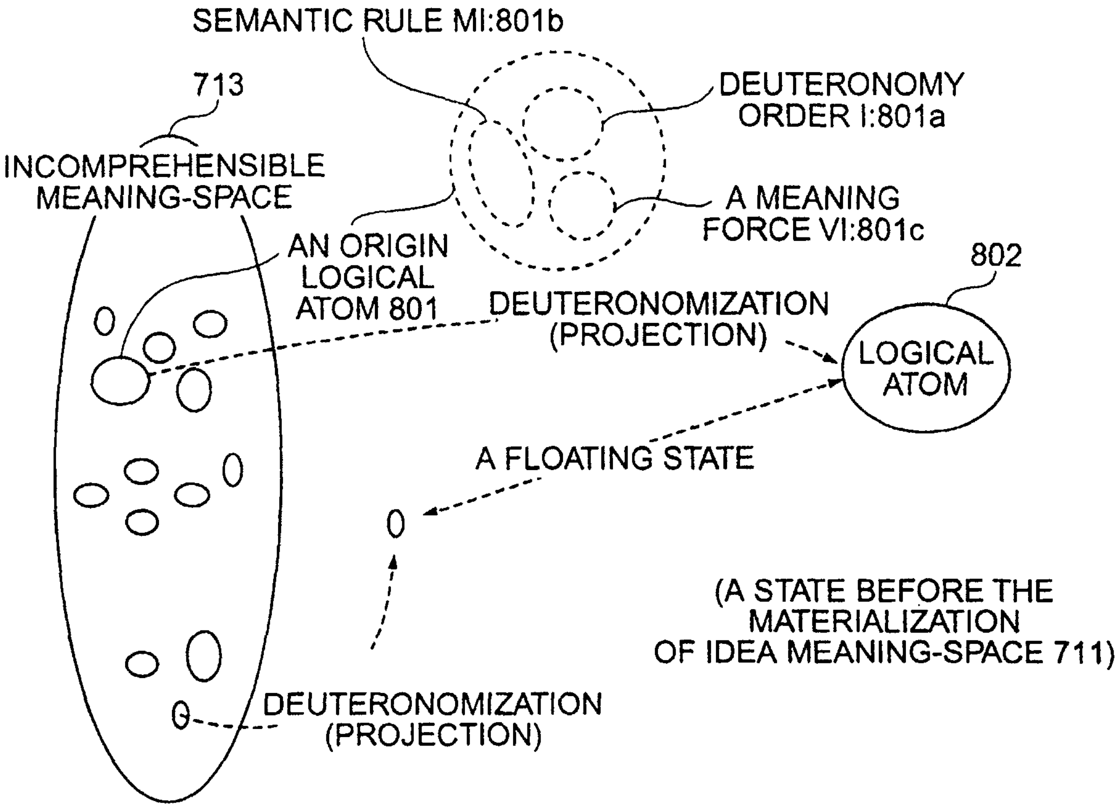

SEMANTIC RULE MI:801b
713
INCOMPREHENSIBLE MEANING-SPACE
DEUTERONOMY ORDER I:801a
A MEANING FORCE VI:801c
AN ORIGIN LOGICAL ATOM 801
802
DEUTERONOMIZATION (PROJECTION)
LOGICAL ATOM
A FLOATING STATE
(A STATE BEFORE THE MATERIALIZATION OF IDEA MEANING-SPACE 711)
DEUTERONOMIZATION (PROJECTION)


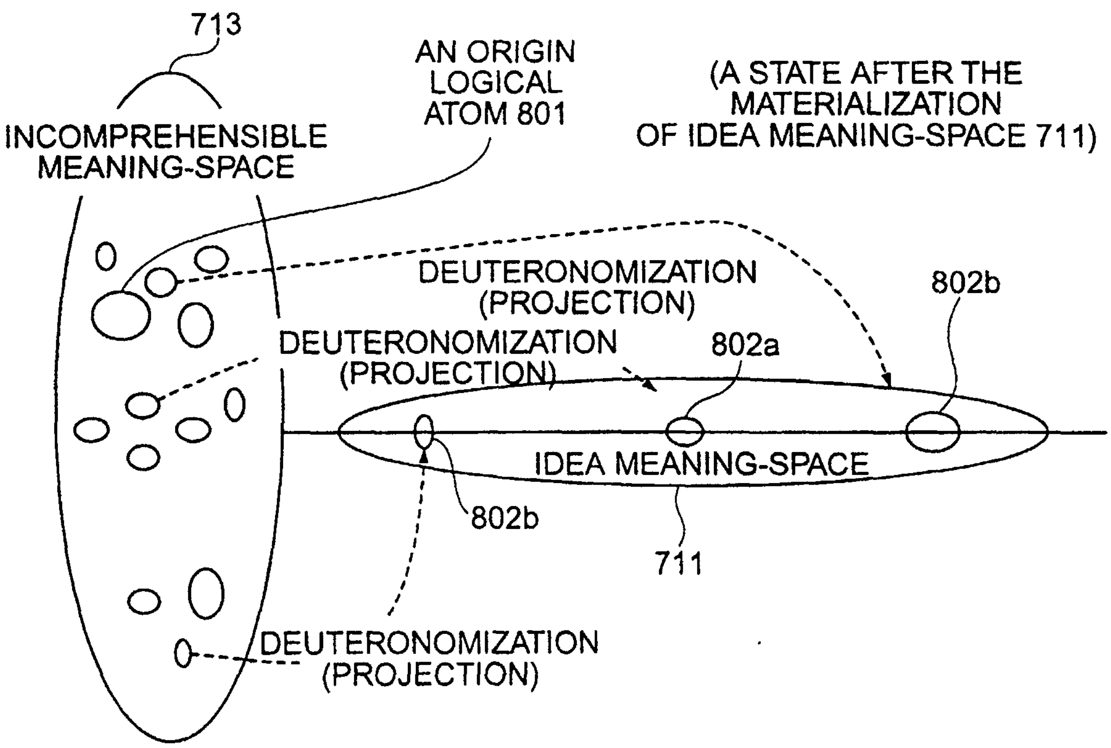

713
INCOMPREHENSIBLE MEANING-SPACE
AN ORIGIN LOGICAL ATOM 801
(A STATE AFTER THE MATERIALIZATION OF IDEA MEANING-SPACE 711)
DEUTERONOMIZATION (PROJECTION)
802b
DEUTERONOMIZATION (PROJECTION)
802a
IDEA MEANING-SPACE
802b
711
DEUTERONOMIZATION (PROJECTION)

# FIG. 9

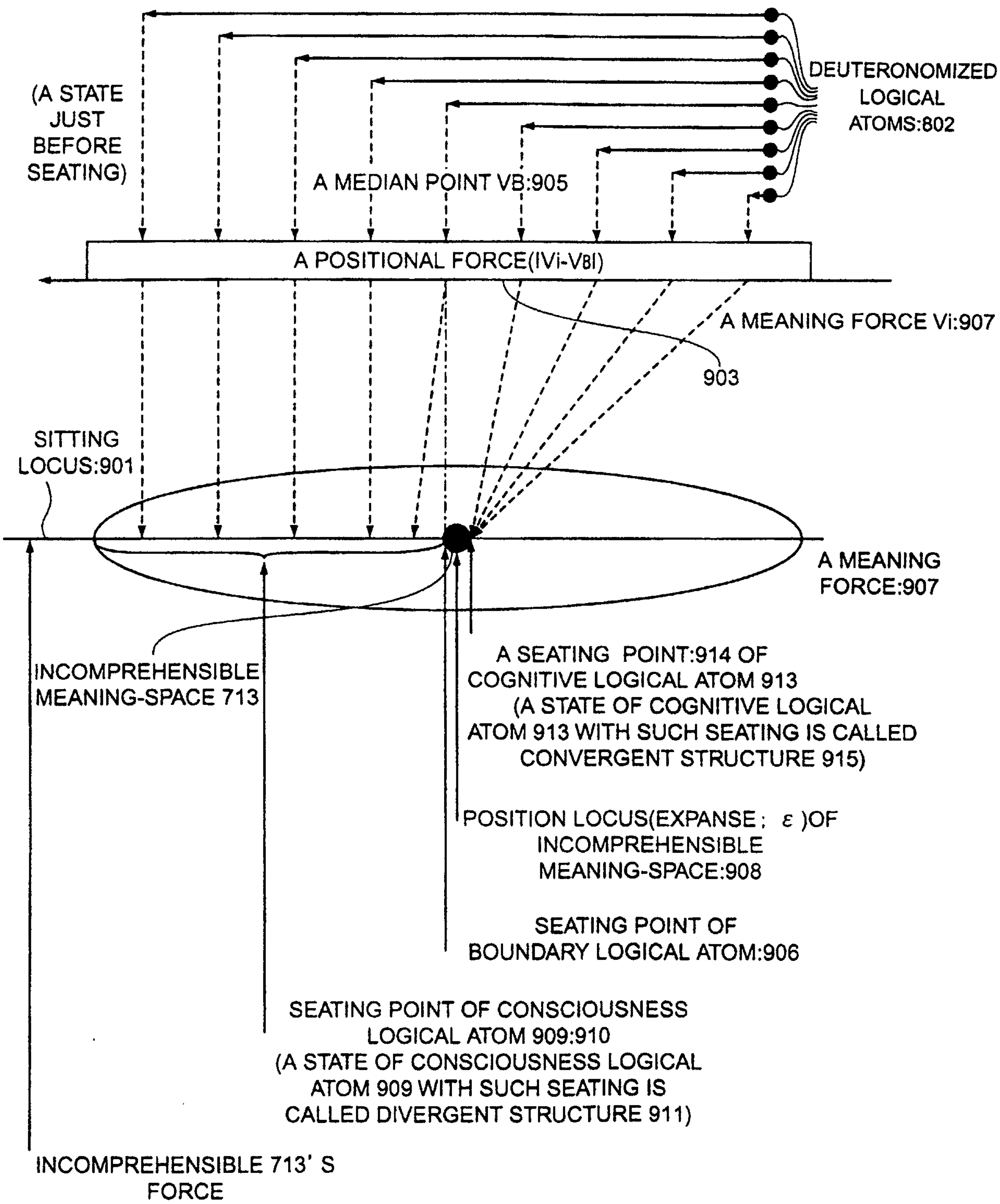
(A STATE JUST BEFORE SEATING)
DEUTERONOMIZED LOGICAL ATOMS:802
A MEDIAN POINT VB:905
A POSITIONAL FORCE(|Vi-VB|)
A MEANING FORCE Vi:907
903
SITTING LOCUS:901
A MEANING FORCE:907
INCOMPREHENSIBLE MEANING-SPACE 713
A SEATING POINT:914 OF COGNITIVE LOGICAL ATOM 913 (A STATE OF COGNITIVE LOGICAL ATOM 913 WITH SUCH SEATING IS CALLED CONVERGENT STRUCTURE 915)
POSITION LOCUS(EXPANSE ; ε )OF INCOMPREHENSIBLE MEANING-SPACE:908
SEATING POINT OF BOUNDARY LOGICAL ATOM:906
SEATING POINT OF CONSCIOUSNESS LOGICAL ATOM 909:910 (A STATE OF CONSCIOUSNESS LOGICAL ATOM 909 WITH SUCH SEATING IS CALLED DIVERGENT STRUCTURE 911)
INCOMPREHENSIBLE 713' S FORCE

FIG. 10

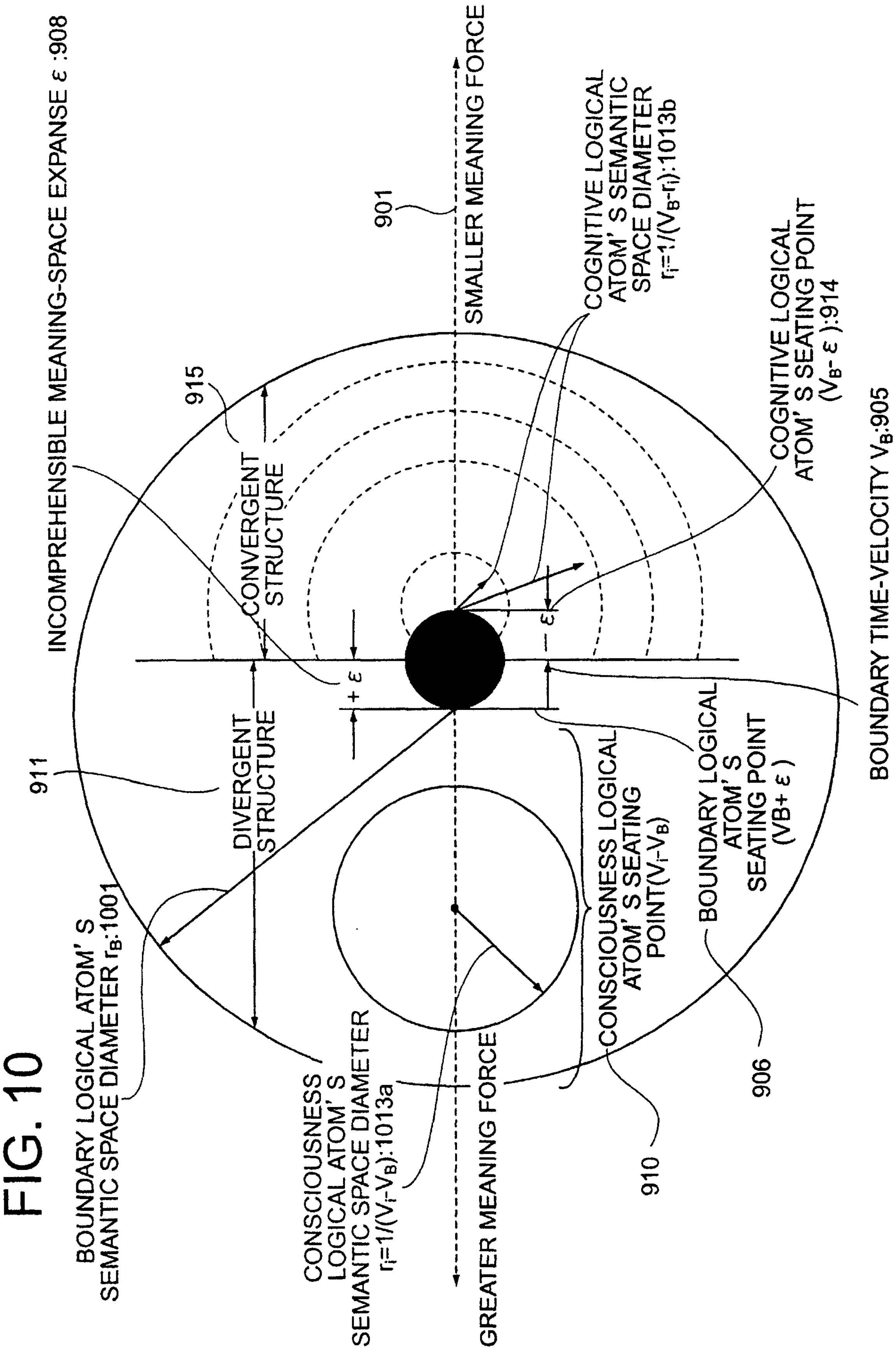
INCOMPREHENSIBLE MEANING-SPACE EXPANSE ε :908
901
SMALLER MEANING FORCE
COGNITIVE LOGICAL ATOM' S SEMANTIC SPACE DIAMETER $r_i$=1/($V_B$-$r_i$):1013b
COGNITIVE LOGICAL ATOM' S SEATING POINT ($V_B$- ε ):914
915
CONVERGENT STRUCTURE
ε
+ ε
BOUNDARY TIME-VELOCITY $V_B$:905
911
DIVERGENT STRUCTURE
BOUNDARY LOGICAL ATOM' S SEATING POINT (VB+ ε )
CONSCIOUSNESS LOGICAL ATOM' S SEATING POINT($V_i$-$V_B$)
906
910
BOUNDARY LOGICAL ATOM' S SEMANTIC SPACE DIAMETER $r_B$:1001
CONSCIOUSNESS LOGICAL ATOM' S SEMANTIC SPACE DIAMETER $r_i$=1/($V_i$-$V_B$):1013a
GREATER MEANING FORCE

FIG. 11

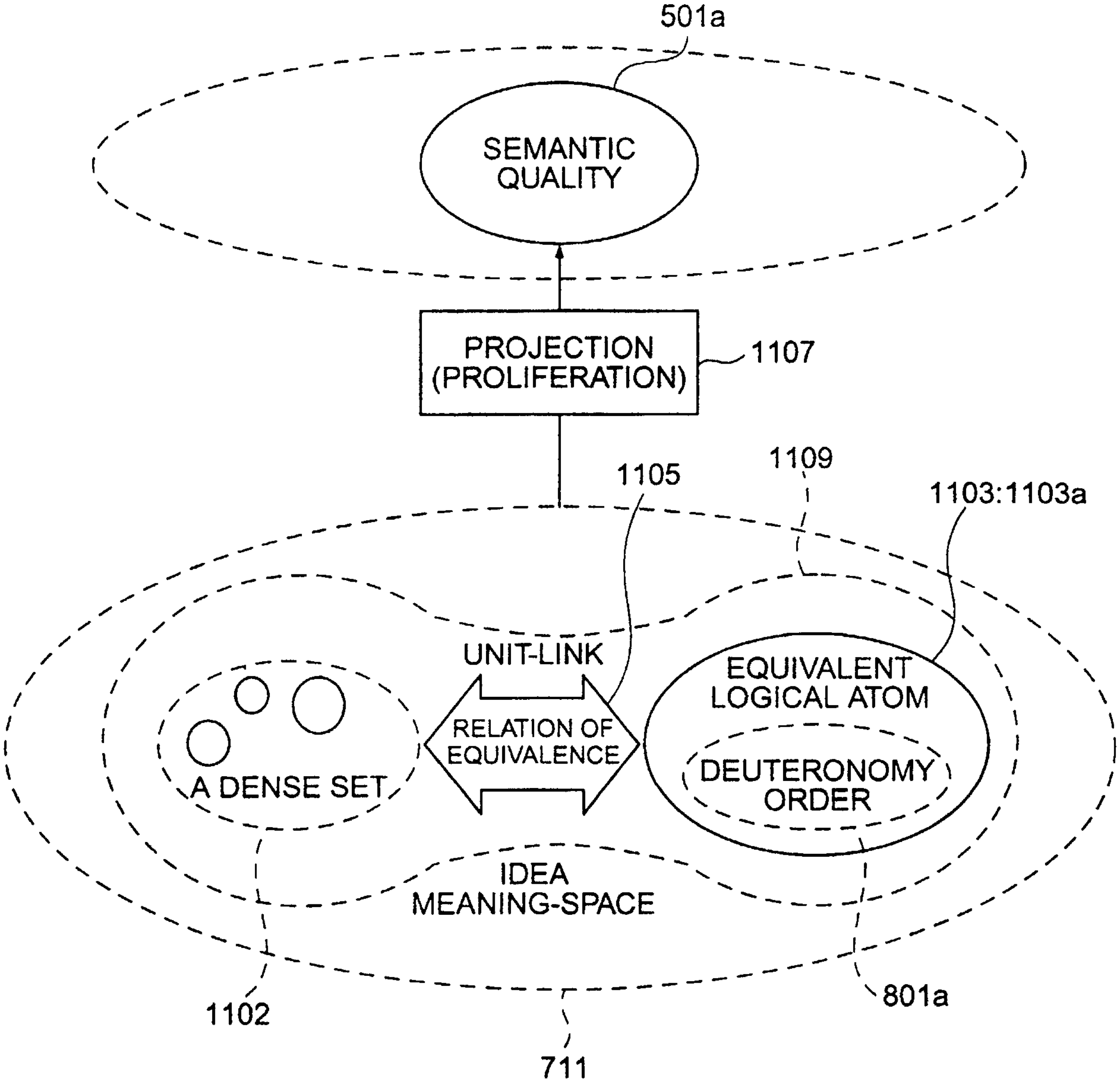
501a
SEMANTIC QUALITY
PROJECTION (PROLIFERATION)
1107
1105
1109
1103:1103a
UNIT-LINK
EQUIVALENT LOGICAL ATOM
RELATION OF EQUIVALENCE
A DENSE SET
DEUTERONOMY ORDER
IDEA MEANING-SPACE
1102
801a
711

FIG. 12

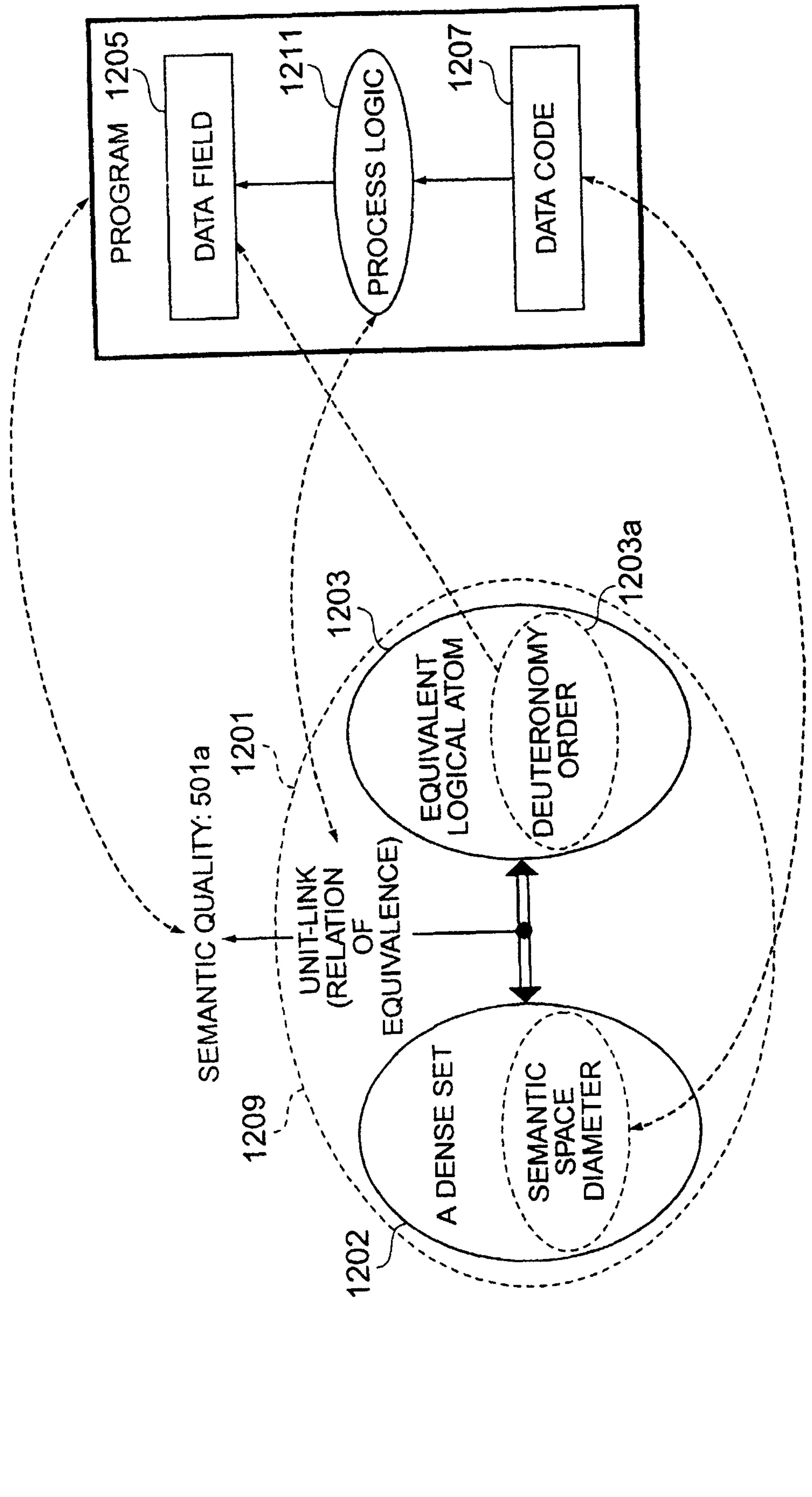
PROGRAM
1205
DATA FIELD
1211
PROCESS LOGIC
1207
DATA CODE
1203
1203a
EQUIVALENT LOGICAL ATOM
DEUTERONOMY ORDER
1201
SEMANTIC QUALITY: 501a
UNIT-LINK (RELATION OF EQUIVALENCE)
1209
A DENSE SET
SEMANTIC SPACE DIAMETER
1202

FIG. 13

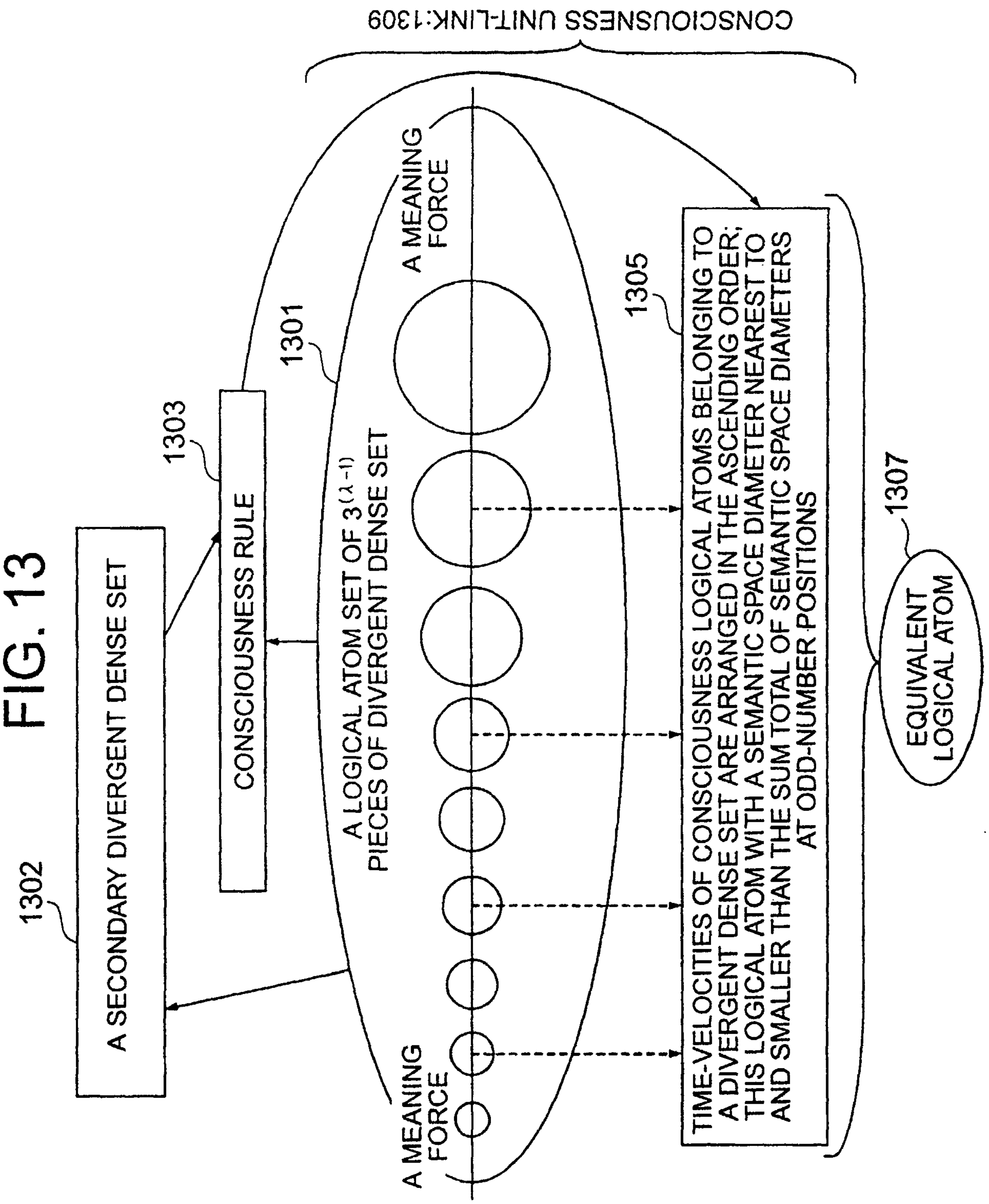
CONSCIOUSNESS UNIT-LINK:1309
1302
A SECONDARY DIVERGENT DENSE SET
1303
CONSCIOUSNESS RULE
1301
A LOGICAL ATOM SET OF $3^{(\lambda-1)}$ PIECES OF DIVERGENT DENSE SET
A MEANING FORCE
A MEANING FORCE
1305
TIME-VELOCITIES OF CONSCIOUSNESS LOGICAL ATOMS BELONGING TO A DIVERGENT DENSE SET ARE ARRANGED IN THE ASCENDING ORDER; THIS LOGICAL ATOM WITH A SEMANTIC SPACE DIAMETER NEAREST TO AND SMALLER THAN THE SUM TOTAL OF SEMANTIC SPACE DIAMETERS AT ODD-NUMBER POSITIONS
1307
EQUIVALENT LOGICAL ATOM

FIG. 14

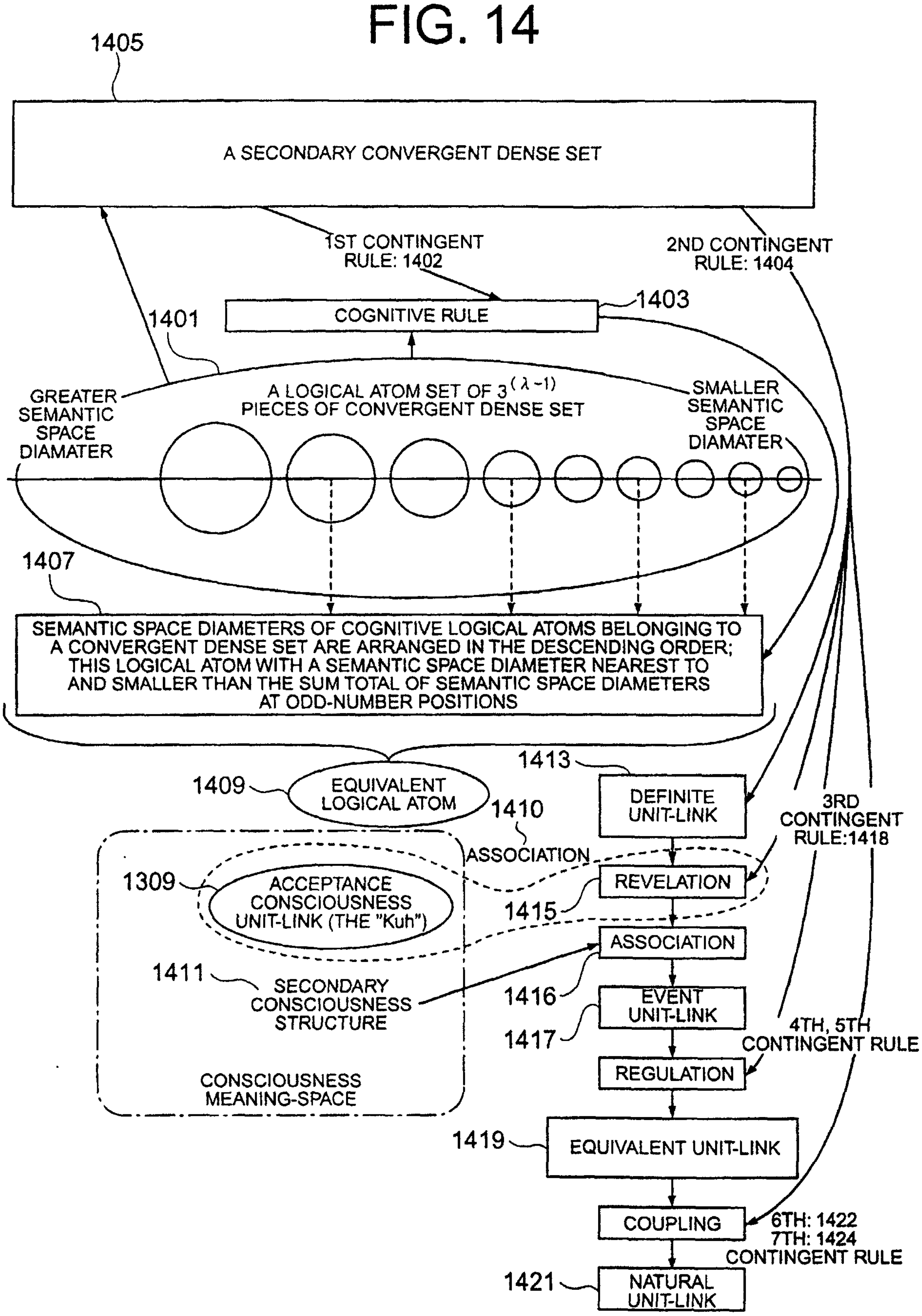
1405
A SECONDARY CONVERGENT DENSE SET
1ST CONTINGENT RULE: 1402
2ND CONTINGENT RULE: 1404
COGNITIVE RULE
1403
1401
GREATER SEMANTIC SPACE DIAMATER
A LOGICAL ATOM SET OF $3^{(\lambda-1)}$ PIECES OF CONVERGENT DENSE SET
SMALLER SEMANTIC SPACE DIAMATER
1407
SEMANTIC SPACE DIAMETERS OF COGNITIVE LOGICAL ATOMS BELONGING TO A CONVERGENT DENSE SET ARE ARRANGED IN THE DESCENDING ORDER; THIS LOGICAL ATOM WITH A SEMANTIC SPACE DIAMETER NEAREST TO AND SMALLER THAN THE SUM TOTAL OF SEMANTIC SPACE DIAMETERS AT ODD-NUMBER POSITIONS
1409
EQUIVALENT LOGICAL ATOM
1410
ASSOCIATION
1413
DEFINITE UNIT-LINK
3RD CONTINGENT RULE:1418
1309
ACCEPTANCE CONSCIOUSNESS UNIT-LINK (THE "Kuh")
REVELATION
1415
ASSOCIATION
1411
SECONDARY CONSCIOUSNESS STRUCTURE
1416
EVENT UNIT-LINK
1417
4TH, 5TH CONTINGENT RULE
REGULATION
CONSCIOUSNESS MEANING-SPACE
1419
EQUIVALENT UNIT-LINK
COUPLING
6TH: 1422
7TH: 1424
CONTINGENT RULE
1421
NATURAL UNIT-LINK

FIG. 15

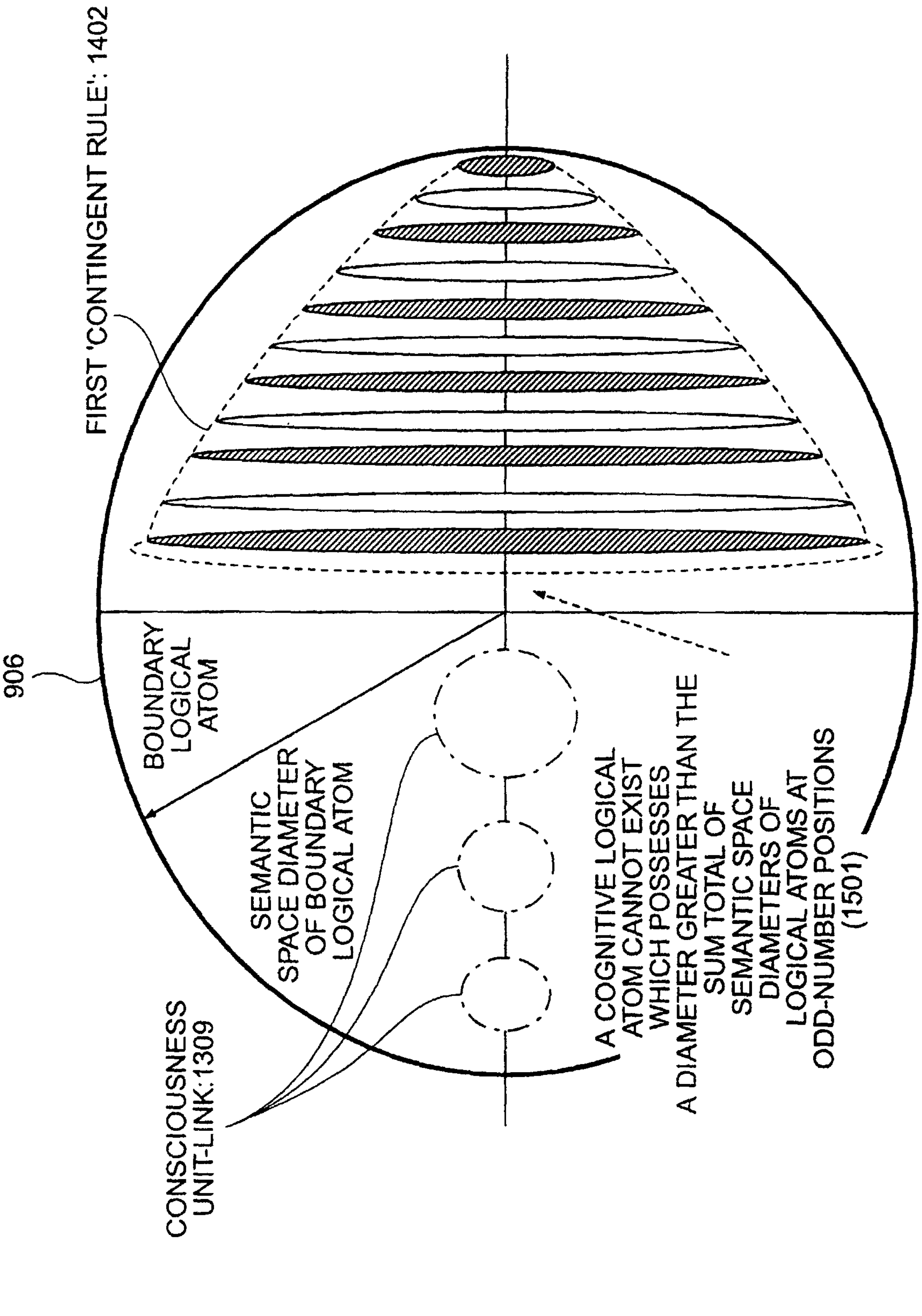
FIRST 'CONTINGENT RULE': 1402
906
BOUNDARY LOGICAL ATOM
SEMANTIC SPACE DIAMETER OF BOUNDARY LOGICAL ATOM
CONSCIOUSNESS UNIT-LINK:1309
A COGNITIVE LOGICAL ATOM CANNOT EXIST WHICH POSSESSES A DIAMETER GREATER THAN THE SUM TOTAL OF SEMANTIC SPACE DIAMETERS OF LOGICAL ATOMS AT ODD-NUMBER POSITIONS (1501)

FIG. 16

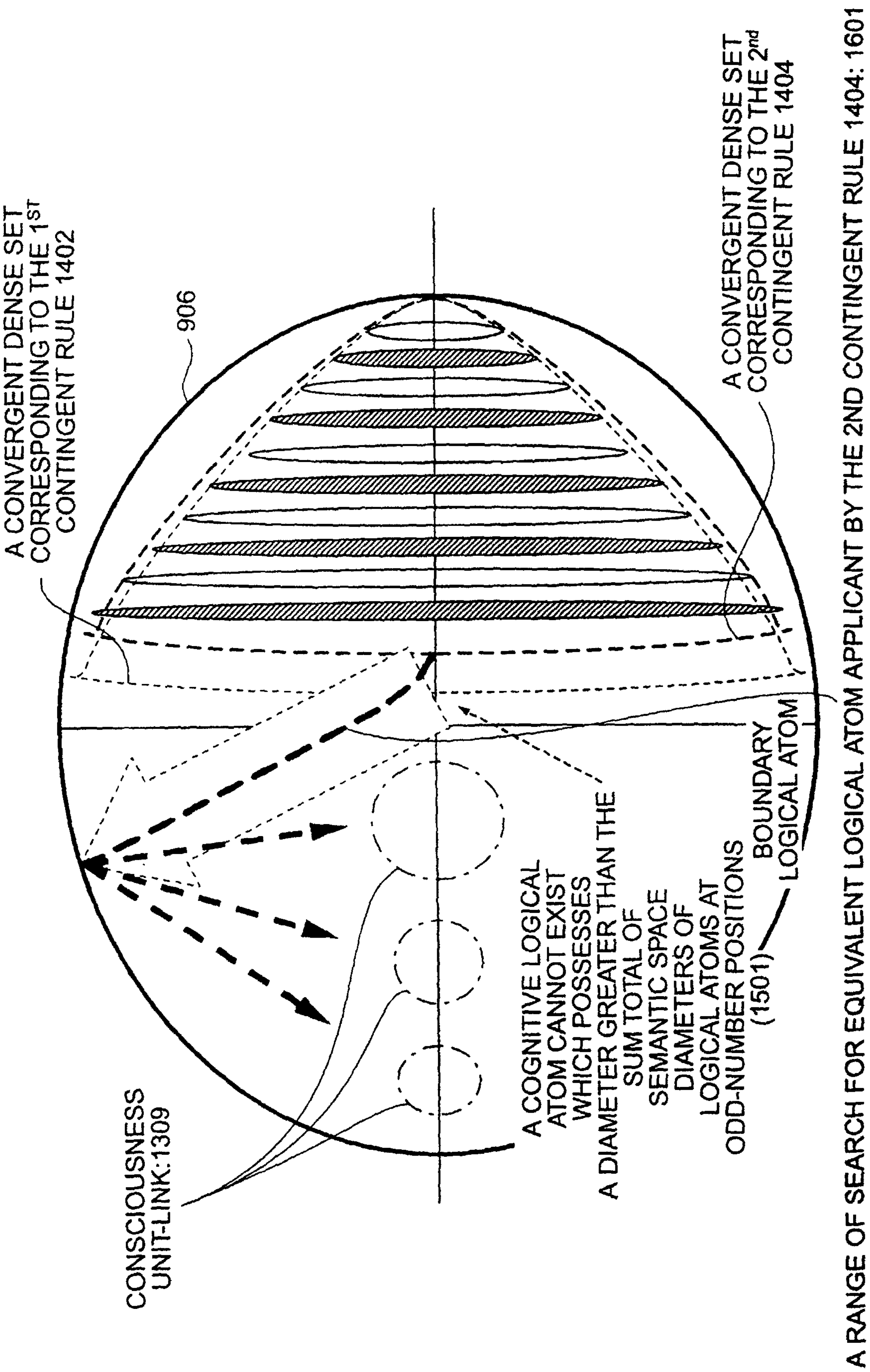

A CONVERGENT DENSE SET CORRESPONDING TO THE 1ST CONTINGENT RULE 1402
906
A CONVERGENT DENSE SET CORRESPONDING TO THE 2nd CONTINGENT RULE 1404
CONSCIOUSNESS UNIT-LINK:1309
A COGNITIVE LOGICAL ATOM CANNOT EXIST WHICH POSSESSES A DIAMETER GREATER THAN THE SUM TOTAL OF SEMANTIC SPACE DIAMETERS OF LOGICAL ATOMS AT ODD-NUMBER POSITIONS (1501)
BOUNDARY LOGICAL ATOM
A RANGE OF SEARCH FOR EQUIVALENT LOGICAL ATOM APPLICANT BY THE 2ND CONTINGENT RULE 1404: 1601

FIG. 17

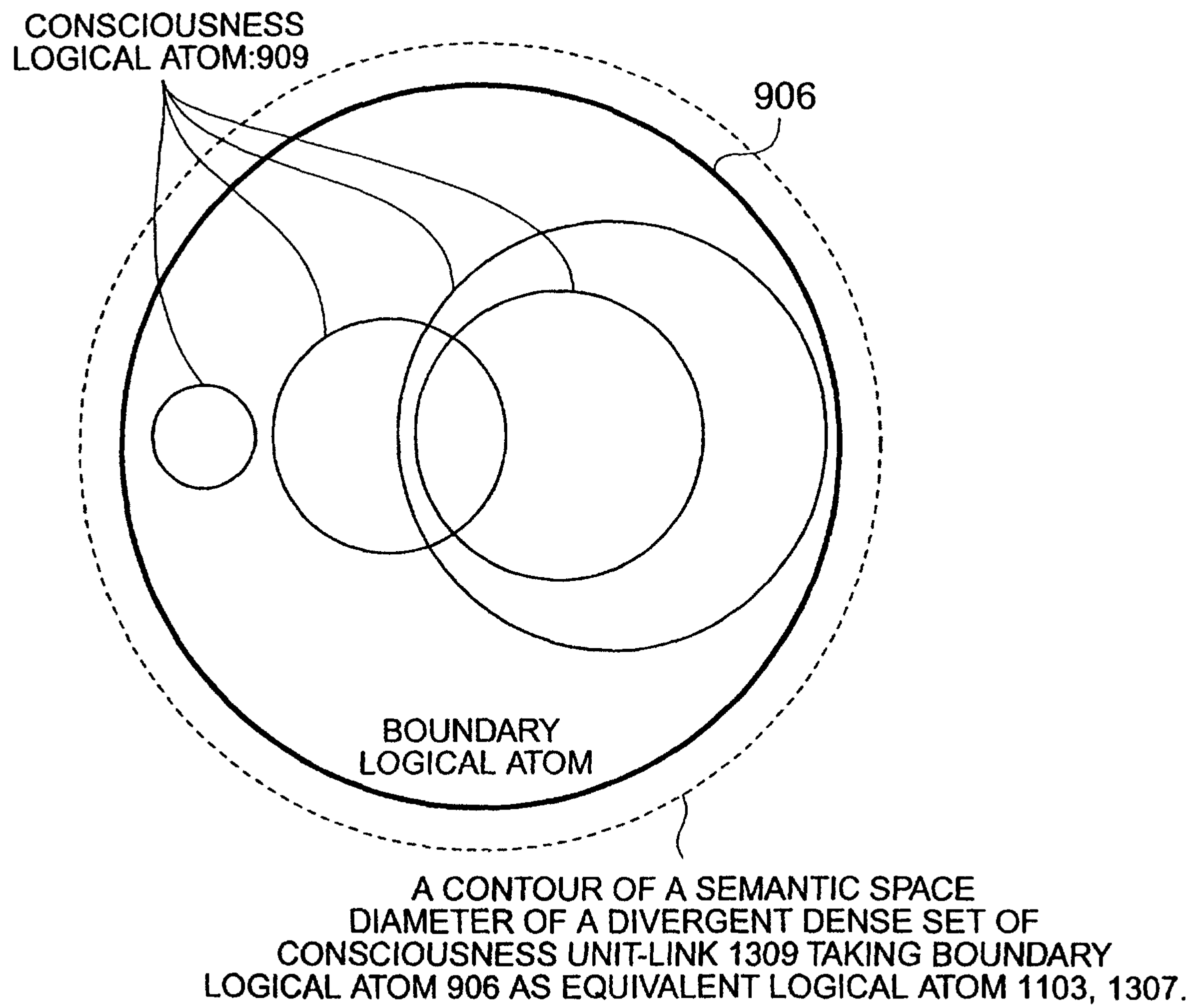
CONSCIOUSNESS
LOGICAL ATOM:909
906
BOUNDARY
LOGICAL ATOM
A CONTOUR OF A SEMANTIC SPACE
DIAMETER OF A DIVERGENT DENSE SET OF
CONSCIOUSNESS UNIT-LINK 1309 TAKING BOUNDARY
LOGICAL ATOM 906 AS EQUIVALENT LOGICAL ATOM 1103, 1307.

FIG. 18

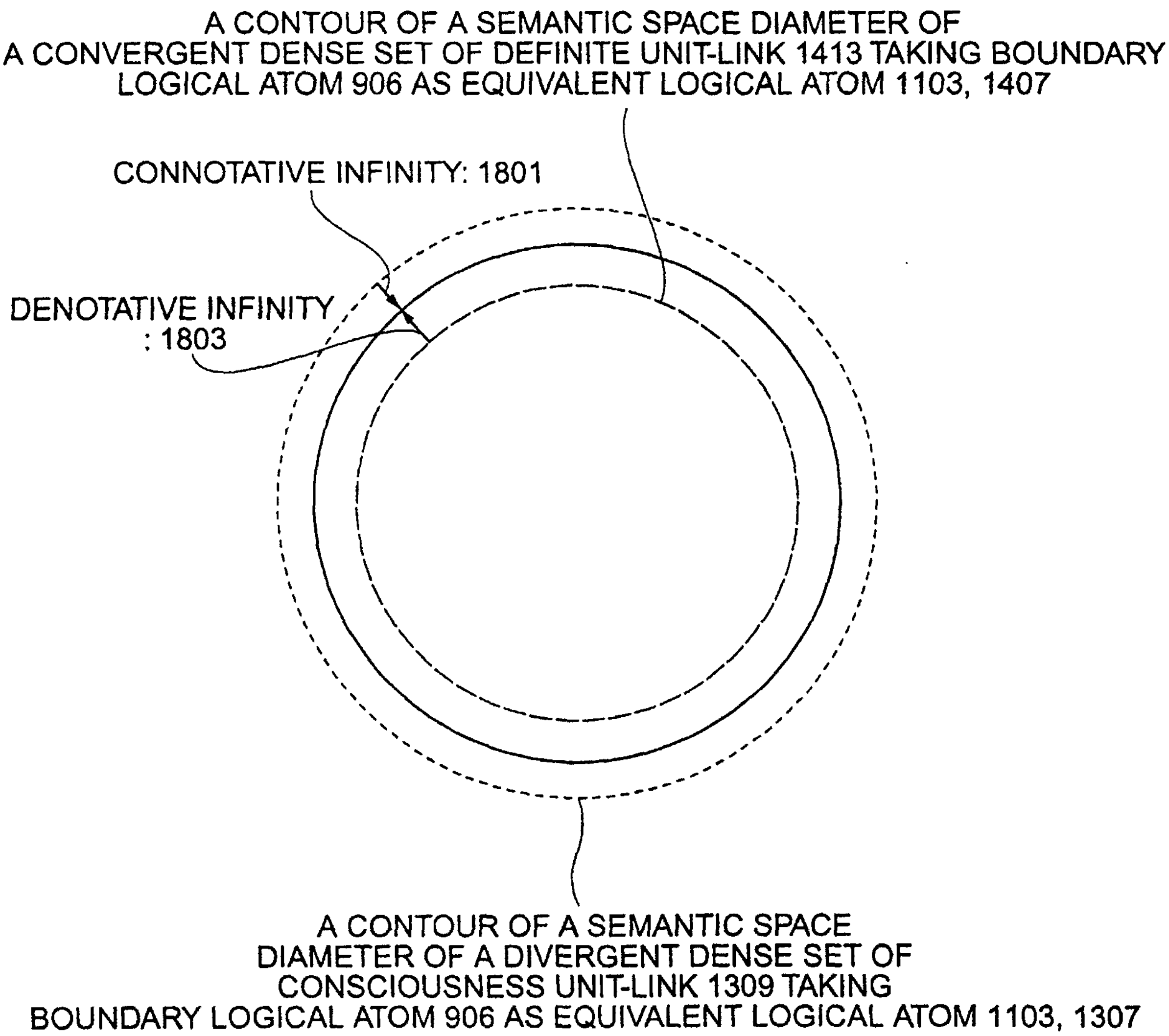
A CONTOUR OF A SEMANTIC SPACE DIAMETER OF A CONVERGENT DENSE SET OF DEFINITE UNIT-LINK 1413 TAKING BOUNDARY LOGICAL ATOM 906 AS EQUIVALENT LOGICAL ATOM 1103, 1407
CONNOTATIVE INFINITY: 1801
DENOTATIVE INFINITY : 1803
A CONTOUR OF A SEMANTIC SPACE DIAMETER OF A DIVERGENT DENSE SET OF CONSCIOUSNESS UNIT-LINK 1309 TAKING BOUNDARY LOGICAL ATOM 906 AS EQUIVALENT LOGICAL ATOM 1103, 1307

FIG. 19

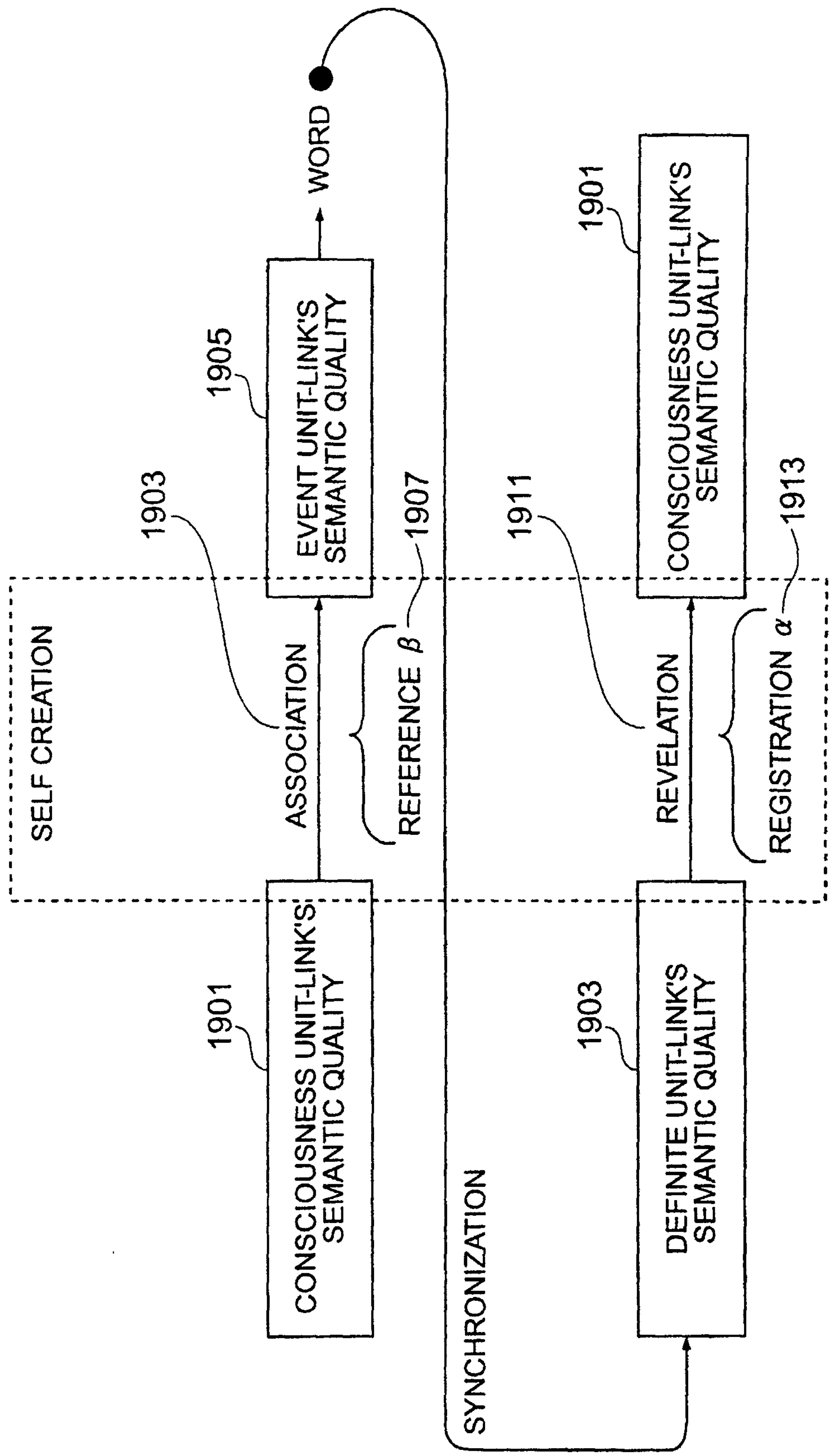
SELF CREATION
1901
CONSCIOUSNESS UNIT-LINK'S SEMANTIC QUALITY
ASSOCIATION
1903
REFERENCE β
1907
1905
EVENT UNIT-LINK'S SEMANTIC QUALITY
WORD
SYNCHRONIZATION
1903
DEFINITE UNIT-LINK'S SEMANTIC QUALITY
REVELATION
1911
REGISTRATION α
1913
1901
CONSCIOUSNESS UNIT-LINK'S SEMANTIC QUALITY

FIG. 20

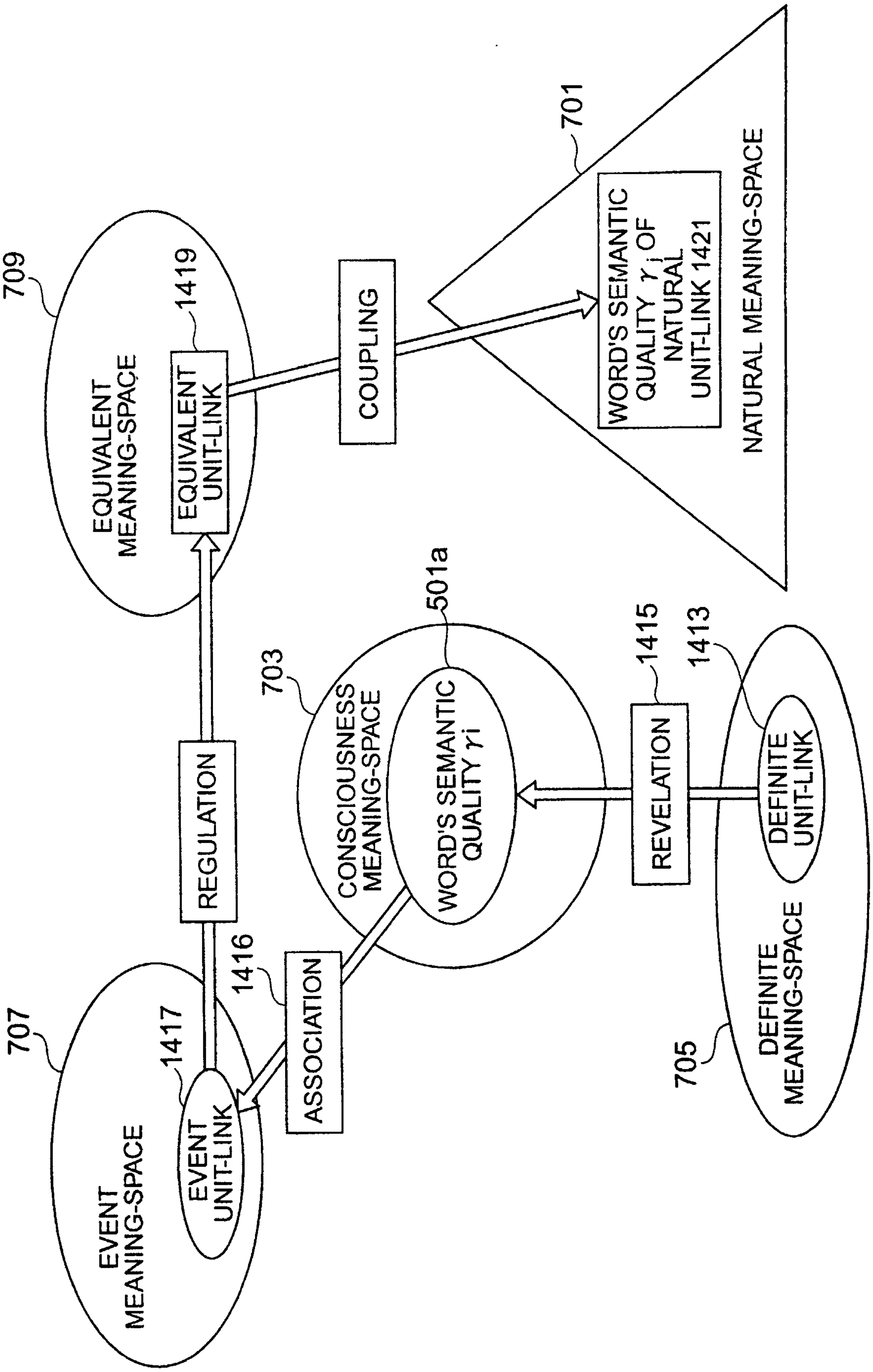

707
EVENT MEANING-SPACE
1417
EVENT UNIT-LINK
1416
ASSOCIATION
REGULATION
703
CONSCIOUSNESS MEANING-SPACE
501a
WORD'S SEMANTIC QUALITY γi
1415
REVELATION
1413
DEFINITE UNIT-LINK
705
DEFINITE MEANING-SPACE
709
EQUIVALENT MEANING-SPACE
1419
EQUIVALENT UNIT-LINK
COUPLING
701
WORD'S SEMANTIC QUALITY γj OF NATURAL UNIT-LINK 1421
NATURAL MEANING-SPACE

FIG. 21

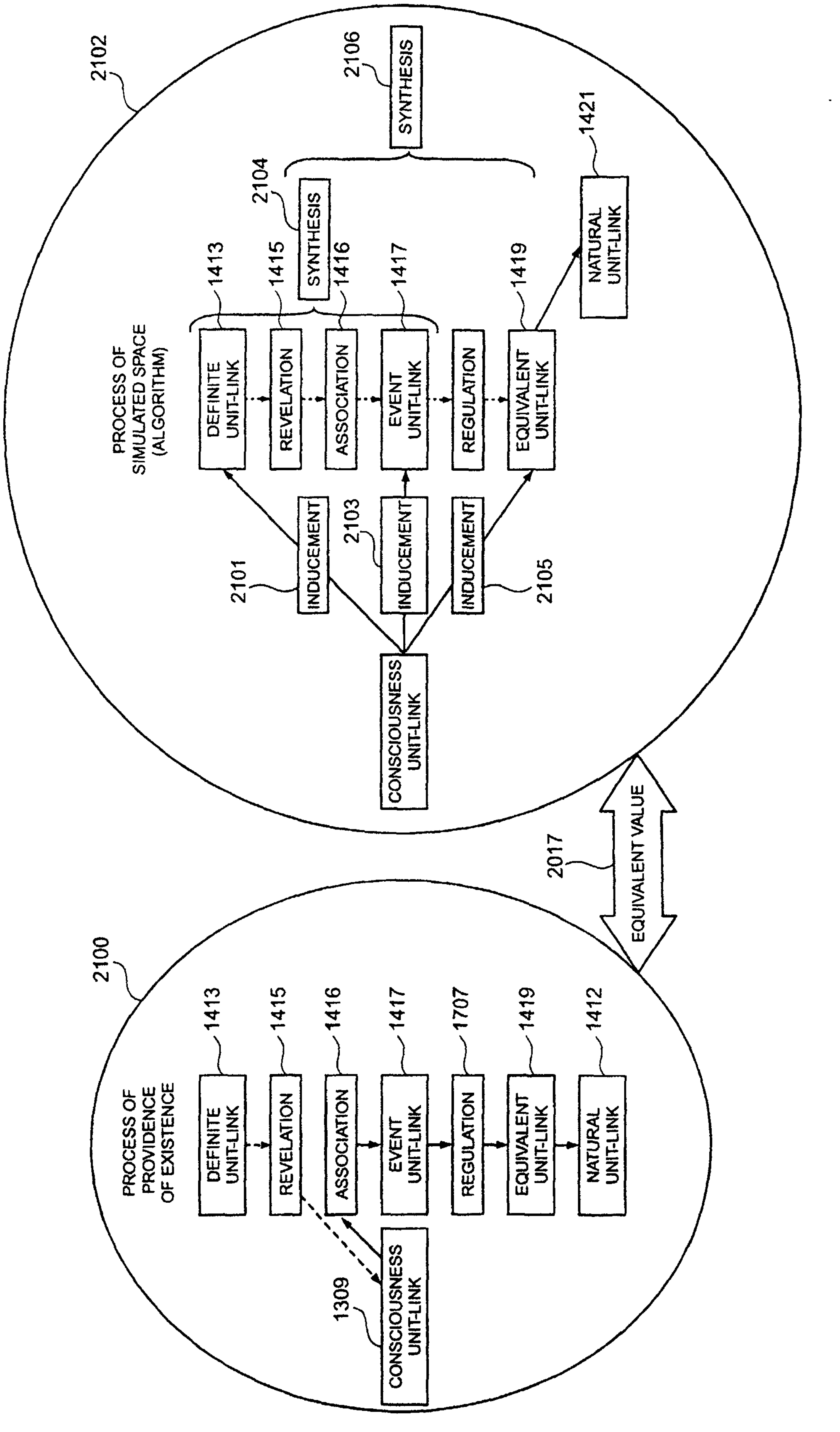
2102
PROCESS OF SIMULATED SPACE (ALGORITHM)
DEFINITE UNIT-LINK
REVELATION
ASSOCIATION
EVENT UNIT-LINK
REGULATION
EQUIVALENT UNIT-LINK
NATURAL UNIT-LINK
SYNTHESIS
SYNTHESIS
INDUCEMENT
INDUCEMENT
INDUCEMENT
CONSCIOUSNESS UNIT-LINK
1413
1415
1416
1417
1419
1421
2101
2103
2104
2105
2106
EQUIVALENT VALUE
2017
2100
PROCESS OF PROVIDENCE OF EXISTENCE
DEFINITE UNIT-LINK
REVELATION
ASSOCIATION
EVENT UNIT-LINK
REGULATION
EQUIVALENT UNIT-LINK
NATURAL UNIT-LINK
CONSCIOUSNESS UNIT-LINK
1413
1415
1416
1417
1707
1419
1412
1309

FIG. 22

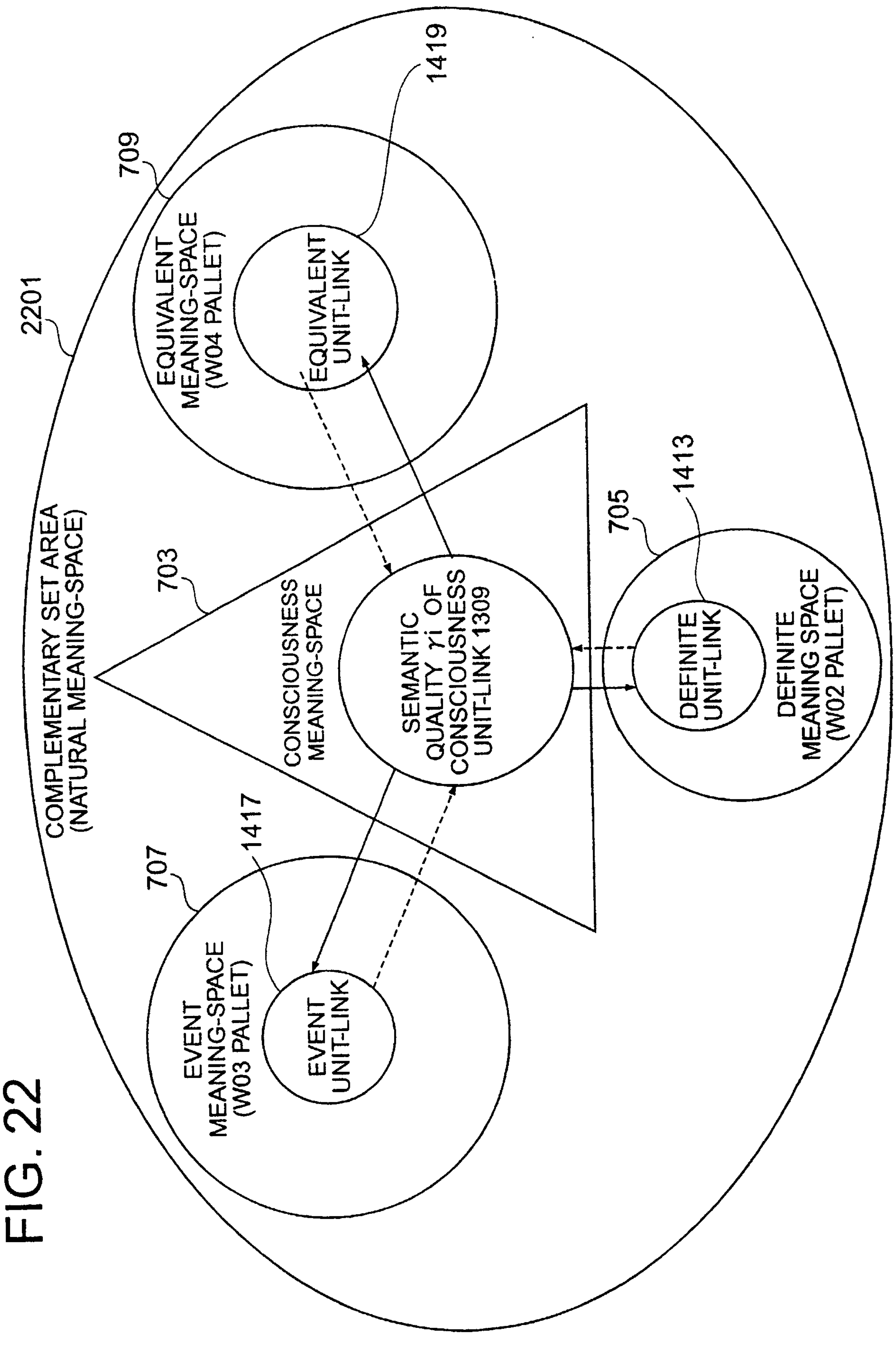
COMPLEMENTARY SET AREA (NATURAL MEANING-SPACE)
2201
703
CONSCIOUSNESS MEANING-SPACE
SEMANTIC QUALITY γi OF CONSCIOUSNESS UNIT-LINK 1309
709
EQUIVALENT MEANING-SPACE (W04 PALLET)
EQUIVALENT UNIT-LINK
1419
707
EVENT MEANING-SPACE (W03 PALLET)
EVENT UNIT-LINK
1417
705
DEFINITE MEANING SPACE (W02 PALLET)
DEFINITE UNIT-LINK
1413

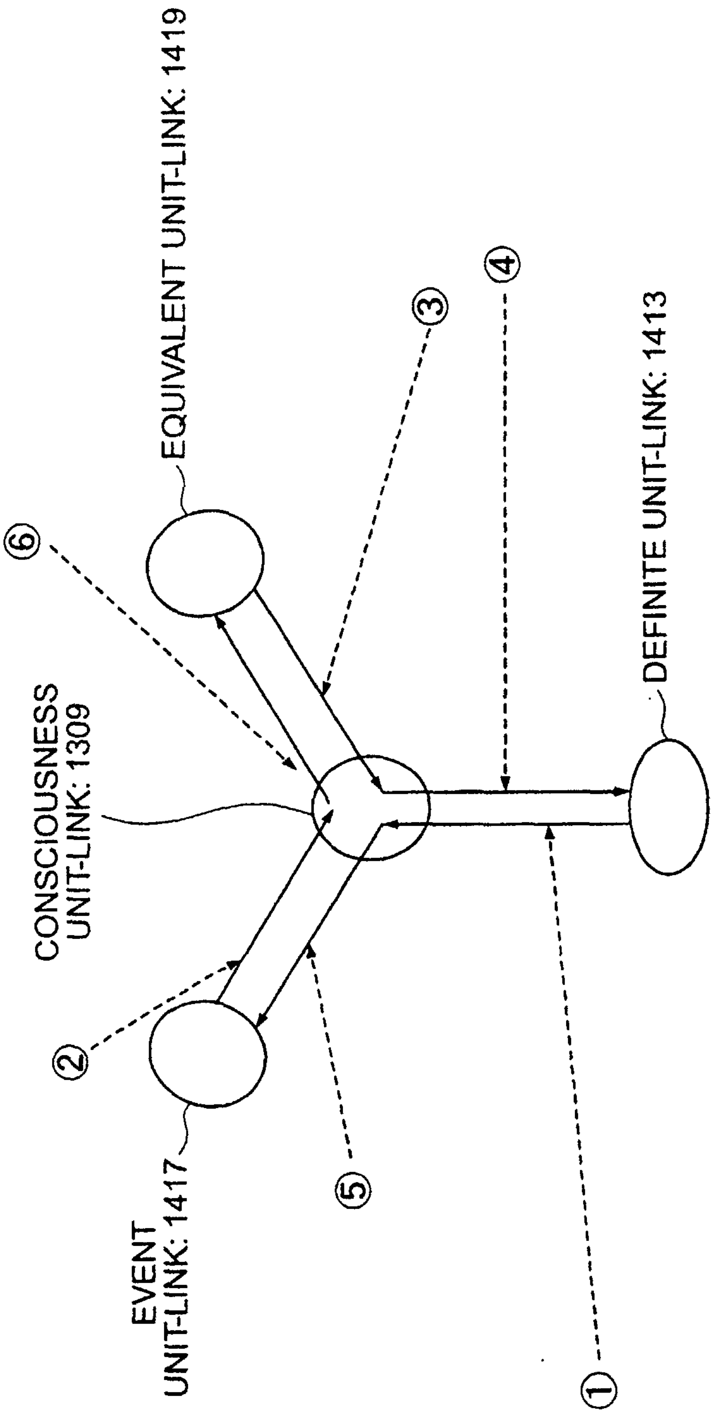
CONSCIOUSNESS UNIT-LINK: 1309
EQUIVALENT UNIT-LINK: 1419
DEFINITE UNIT-LINK: 1413
EVENT UNIT-LINK: 1417
①
②
③
④
⑤
⑥

FIG. 23

FIG. 24

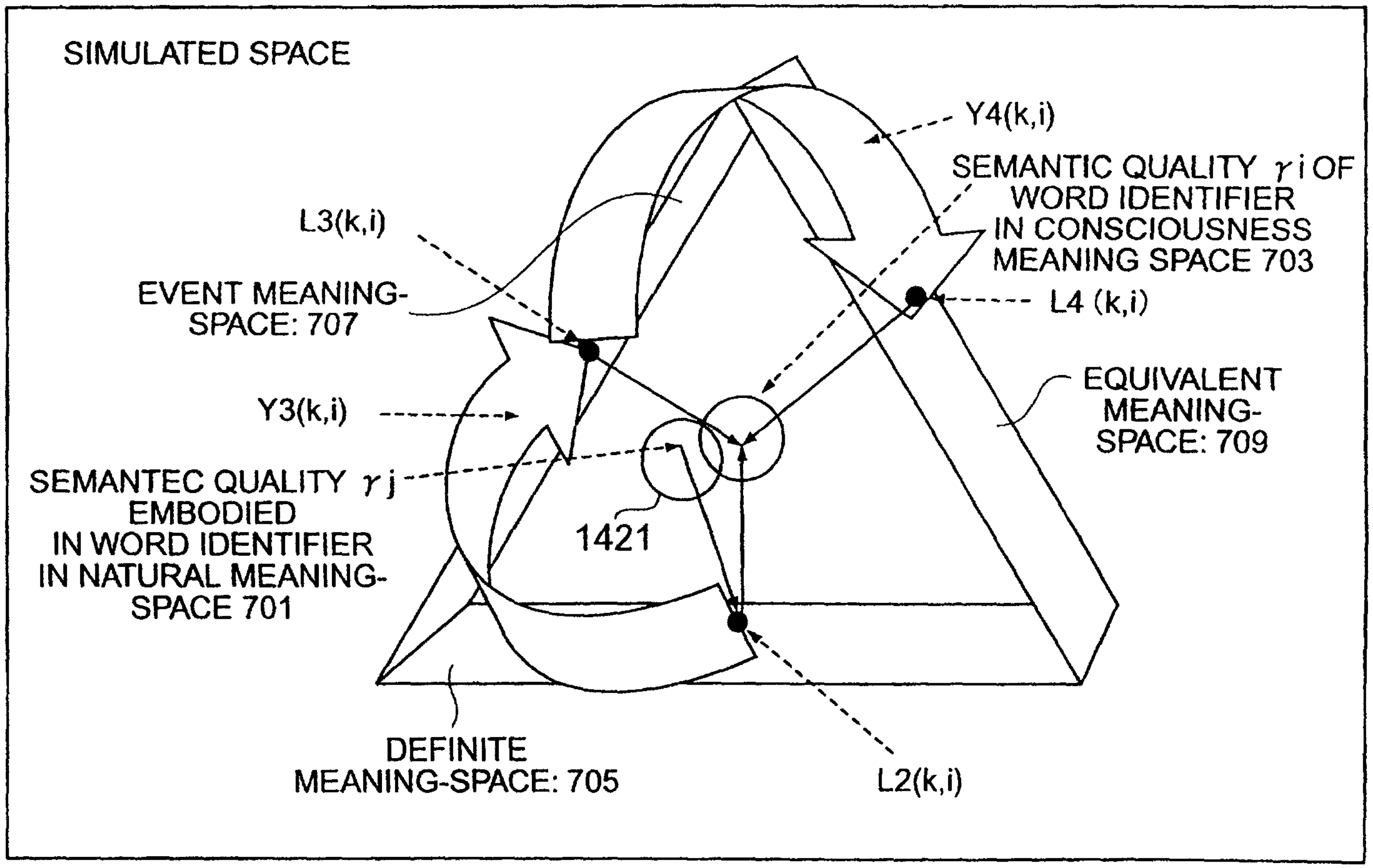
SIMULATED SPACE
Y4(k,i)
SEMANTIC QUALITY γi OF WORD IDENTIFIER IN CONSCIOUSNESS MEANING SPACE 703
L3(k,i)
EVENT MEANING-SPACE: 707
L4 (k,i)
EQUIVALENT MEANING-SPACE: 709
Y3(k,i)
SEMANTEC QUALITY γj EMBODIED IN WORD IDENTIFIER IN NATURAL MEANING-SPACE 701
1421
DEFINITE MEANING-SPACE: 705
L2(k,i)

FIG. 25

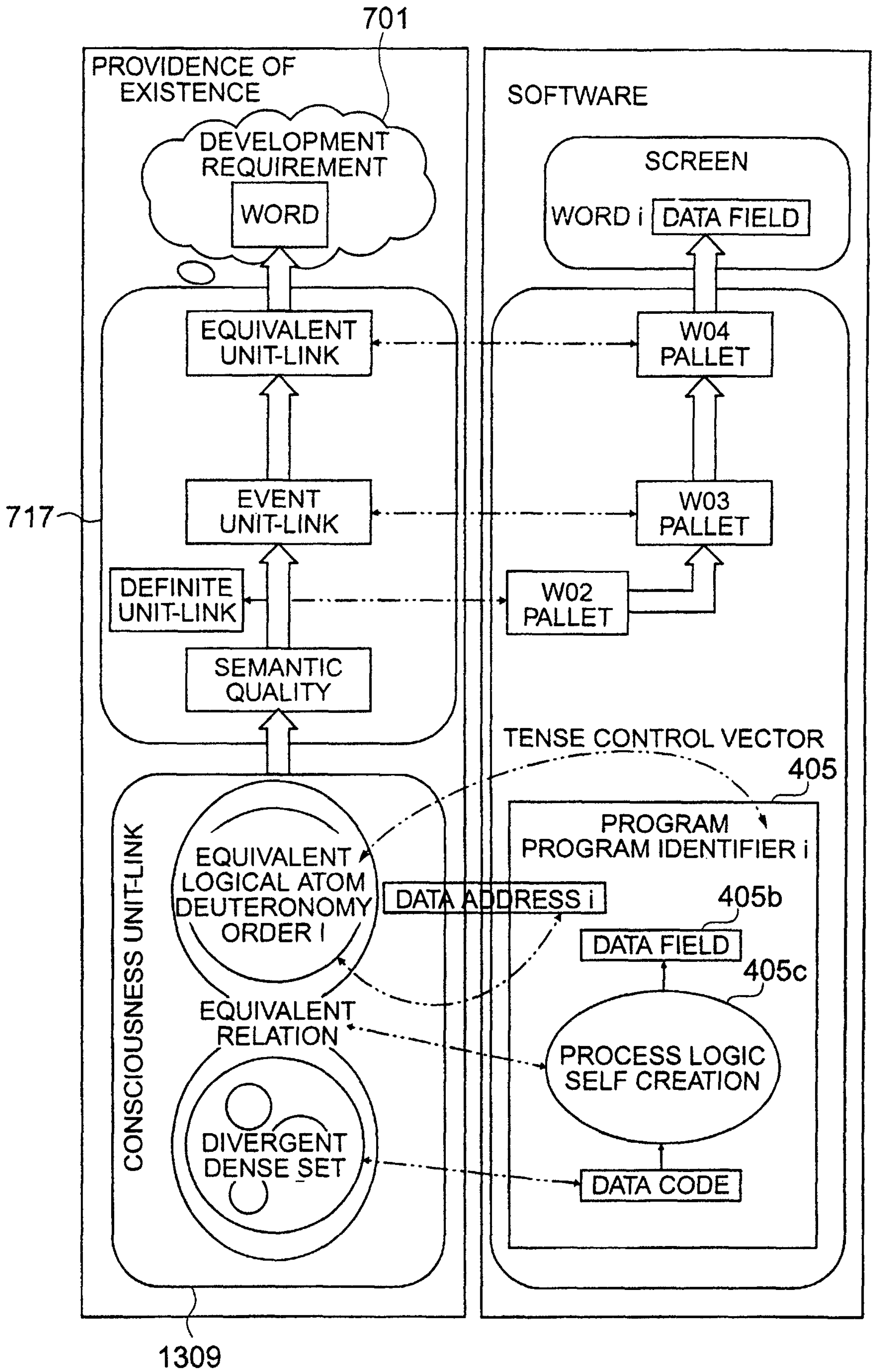
701
PROVIDENCE OF EXISTENCE
DEVELOPMENT REQUIREMENT
WORD
EQUIVALENT UNIT-LINK
EVENT UNIT-LINK
DEFINITE UNIT-LINK
SEMANTIC QUALITY
717
CONSCIOUSNESS UNIT-LINK
EQUIVALENT LOGICAL ATOM DEUTERONOMY ORDER I
EQUIVALENT RELATION
DIVERGENT DENSE SET
1309
SOFTWARE
SCREEN
WORD i
DATA FIELD
W04 PALLET
W03 PALLET
W02 PALLET
TENSE CONTROL VECTOR
405
PROGRAM
PROGRAM IDENTIFIER i
DATA ADDRESS i
405b
DATA FIELD
405c
PROCESS LOGIC SELF CREATION
DATA CODE

FIG. 26

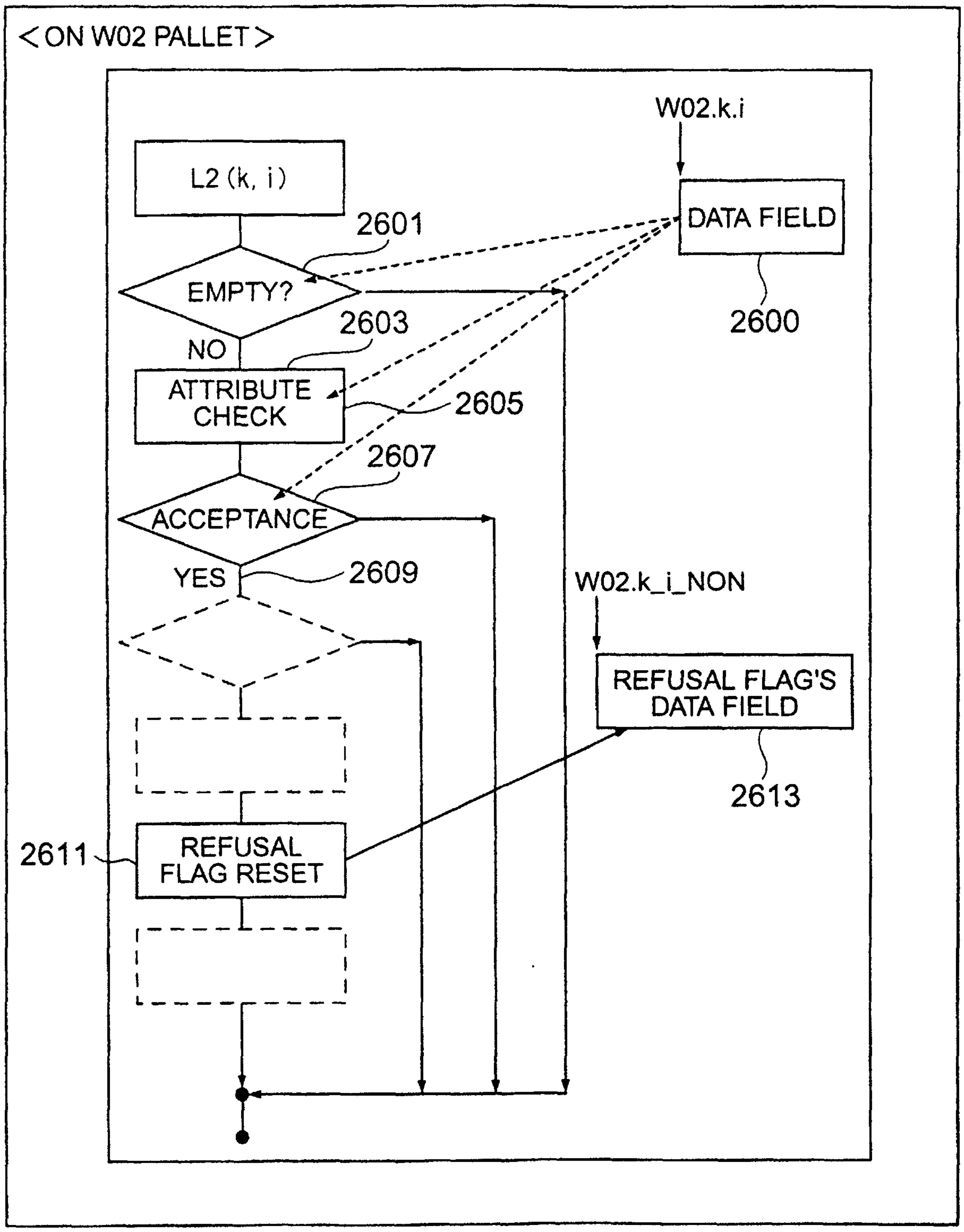
<ON W02 PALLET>
W02.k.i
L2 (k, i)
DATA FIELD
2601
EMPTY?
2600
2603
NO
ATTRIBUTE CHECK
2605
2607
ACCEPTANCE
YES
2609
W02.k_i_NON
REFUSAL FLAG'S DATA FIELD
2613
2611
REFUSAL FLAG RESET

FIG. 27

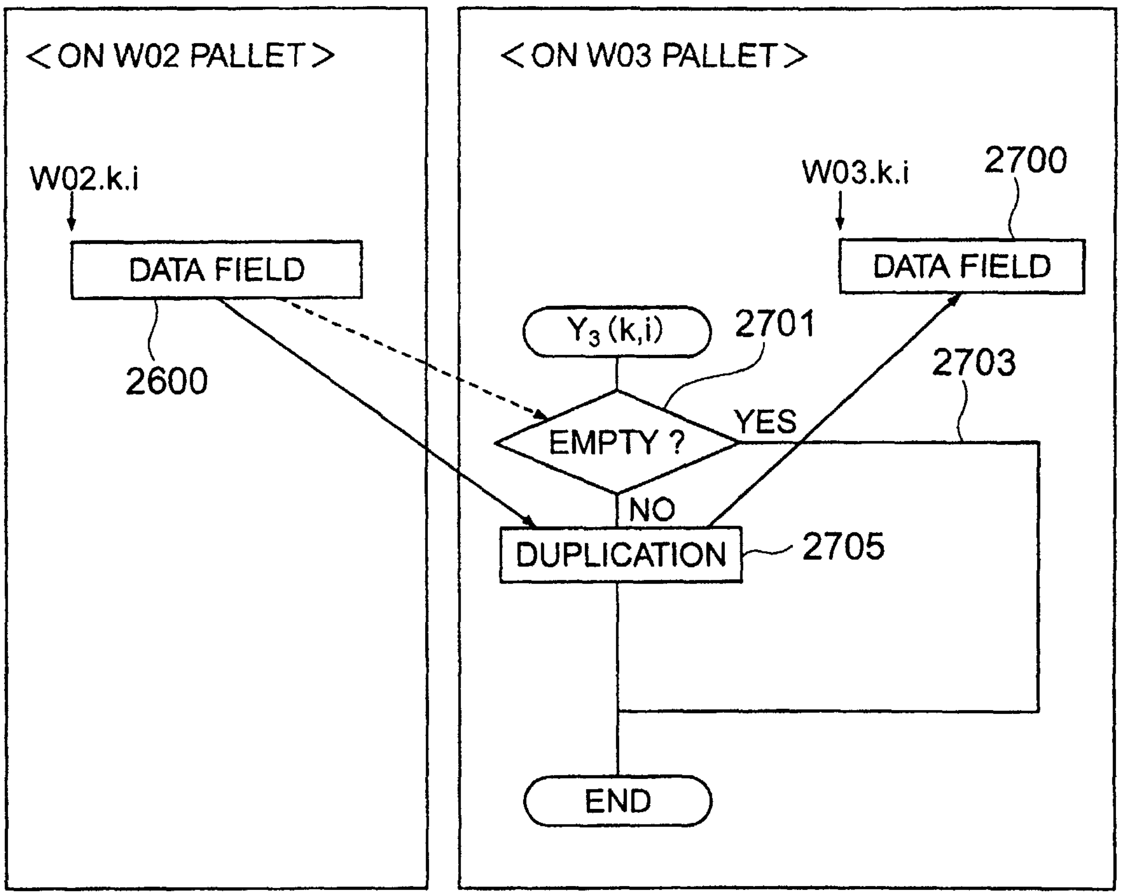
<ON W02 PALLET>
W02.k.i
DATA FIELD
2600
<ON W03 PALLET>
W03.k.i
2700
DATA FIELD
$Y_3$ (k,i)
2701
2703
EMPTY ?
YES
NO
DUPLICATION
2705
END

FIG. 28

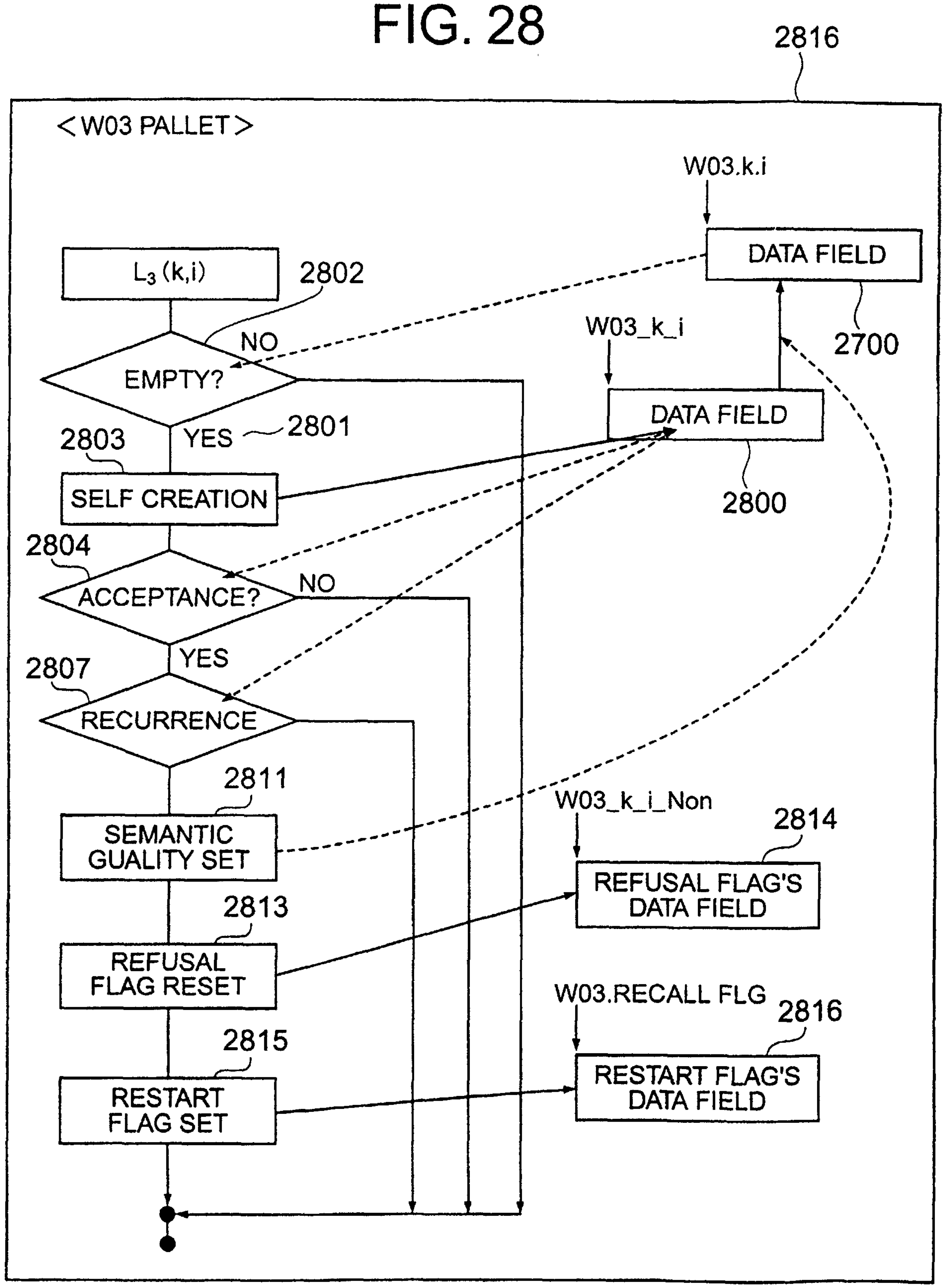
2816
<W03 PALLET>
W03.k.i
DATA FIELD
2700
L3 (k,i)
2802
NO
EMPTY?
YES
2801
W03_k_i
DATA FIELD
2800
2803
SELF CREATION
2804
ACCEPTANCE?
NO
YES
2807
RECURRENCE
2811
SEMANTIC GUALITY SET
W03_k_i_Non
2814
REFUSAL FLAG'S DATA FIELD
2813
REFUSAL FLAG RESET
W03.RECALL FLG
2816
RESTART FLAG'S DATA FIELD
2815
RESTART FLAG SET

FIG. 29

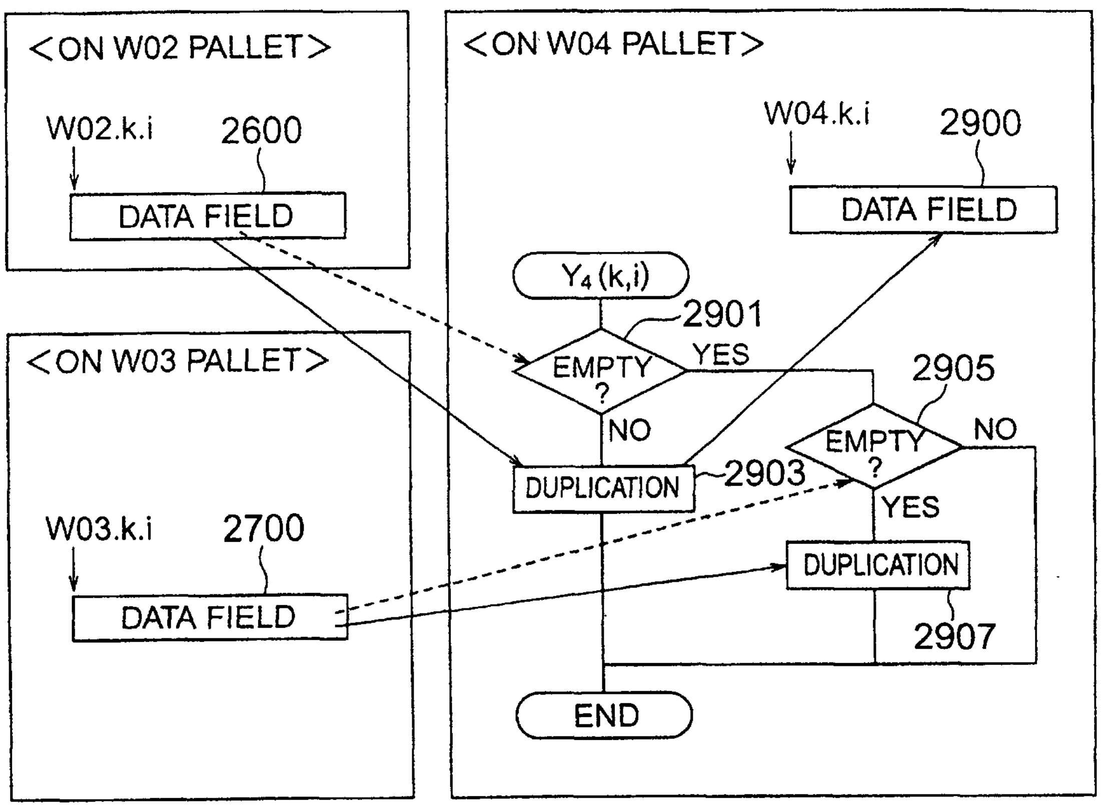

<ON W02 PALLET>
W02.k.i
2600
DATA FIELD
<ON W03 PALLET>
W03.k.i
2700
DATA FIELD
<ON W04 PALLET>
W04.k.i
2900
DATA FIELD
Y4 (k,i)
2901
EMPTY ?
YES
NO
DUPLICATION
2903
2905
EMPTY ?
NO
YES
DUPLICATION
2907
END

FIG. 30

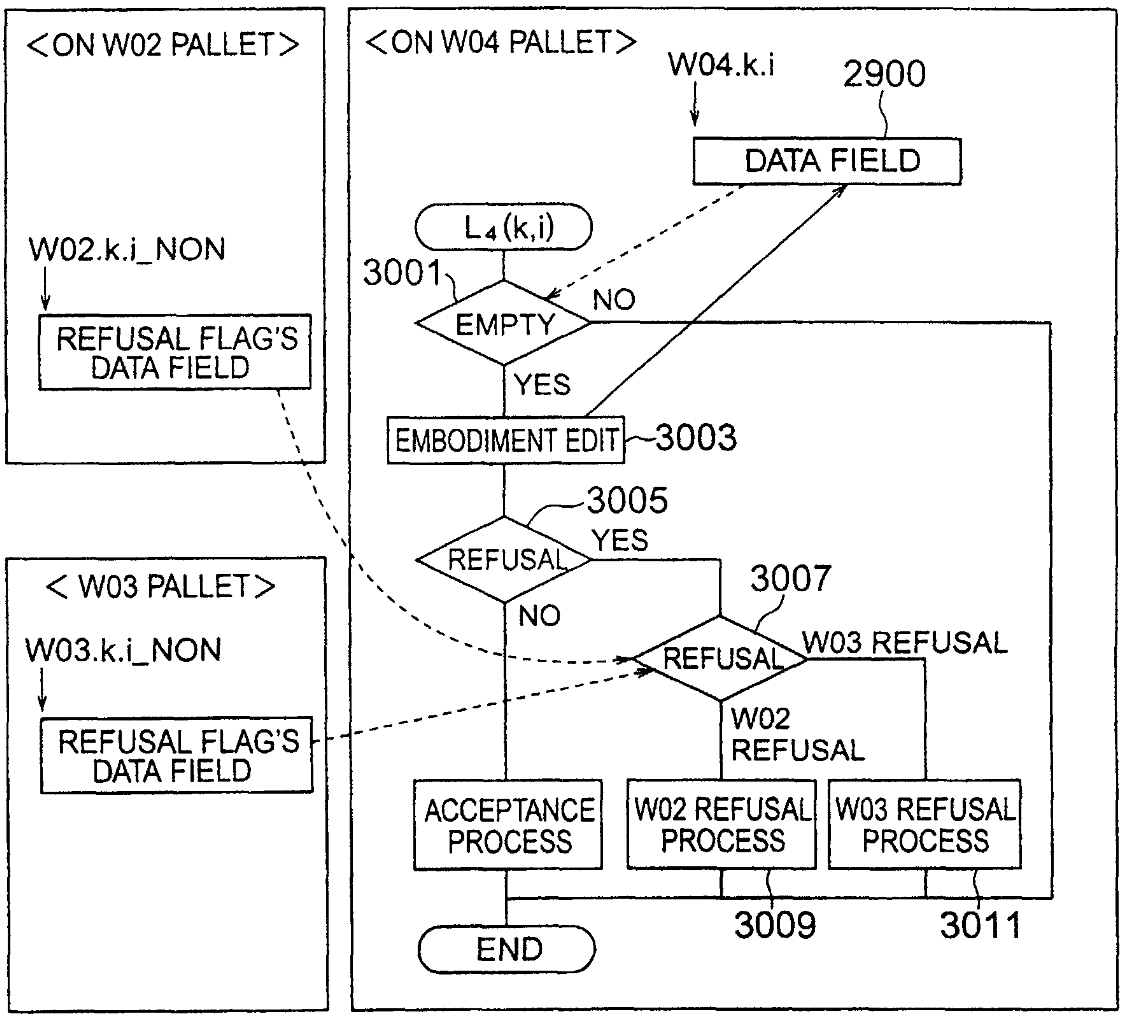

<ON W02 PALLET>
W02.k.i_NON
REFUSAL FLAG'S DATA FIELD
< W03 PALLET>
W03.k.i_NON
REFUSAL FLAG'S DATA FIELD
<ON W04 PALLET>
W04.k.i
2900
DATA FIELD
L4(k,i)
3001
EMPTY
NO
YES
EMBODIMENT EDIT
3003
3005
REFUSAL
YES
NO
3007
REFUSAL
W03 REFUSAL
W02 REFUSAL
ACCEPTANCE PROCESS
W02 REFUSAL PROCESS
W03 REFUSAL PROCESS
3009
3011
END

FIG. 31

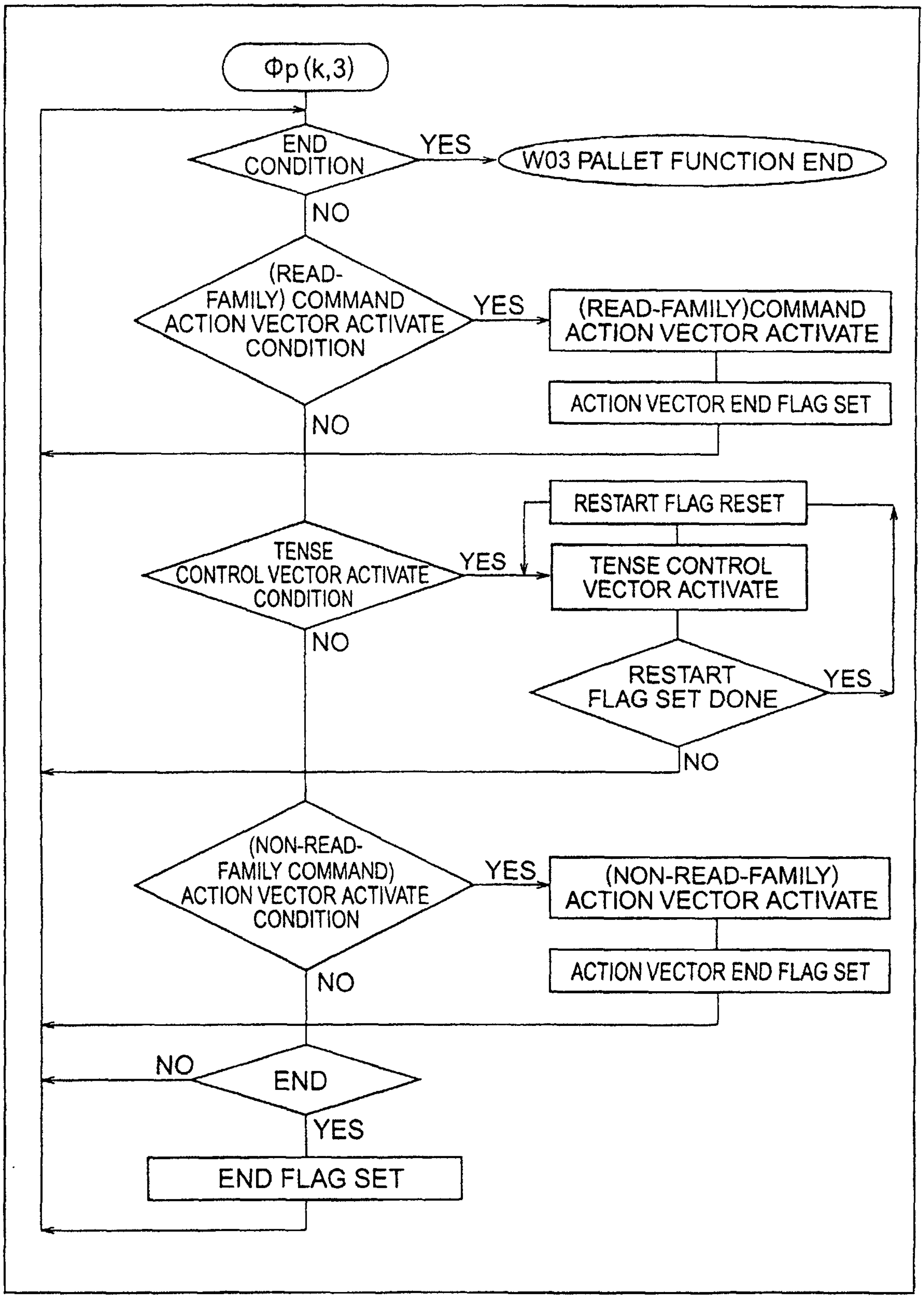
Φp (k,3)
END CONDITION
YES
W03 PALLET FUNCTION END
NO
(READ-FAMILY) COMMAND ACTION VECTOR ACTIVATE CONDITION
YES
(READ-FAMILY)COMMAND ACTION VECTOR ACTIVATE
ACTION VECTOR END FLAG SET
NO
RESTART FLAG RESET
TENSE CONTROL VECTOR ACTIVATE CONDITION
YES
TENSE CONTROL VECTOR ACTIVATE
NO
RESTART FLAG SET DONE
YES
NO
(NON-READ-FAMILY COMMAND) ACTION VECTOR ACTIVATE CONDITION
YES
(NON-READ-FAMILY) ACTION VECTOR ACTIVATE
ACTION VECTOR END FLAG SET
NO
NO
END
YES
END FLAG SET

FIG. 32

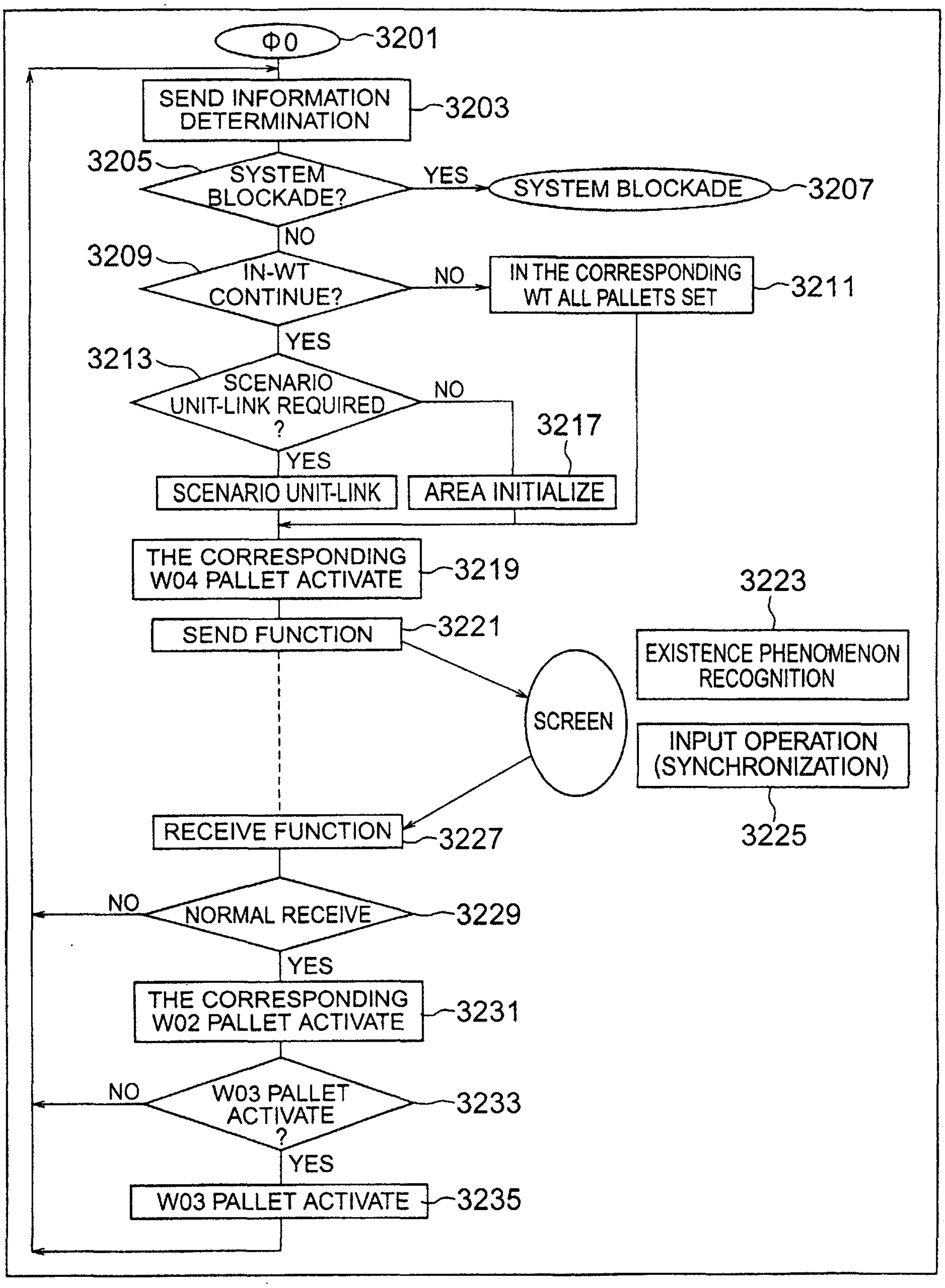
Φ0
3201
SEND INFORMATION DETERMINATION
3203
3205
SYSTEM BLOCKADE?
YES
SYSTEM BLOCKADE
3207
NO
3209
IN-WT CONTINUE?
NO
IN THE CORRESPONDING WT ALL PALLETS SET
3211
YES
3213
SCENARIO UNIT-LINK REQUIRED ?
NO
3217
YES
SCENARIO UNIT-LINK
AREA INITIALIZE
THE CORRESPONDING W04 PALLET ACTIVATE
3219
SEND FUNCTION
3221
3223
EXISTENCE PHENOMENON RECOGNITION
SCREEN
INPUT OPERATION (SYNCHRONIZATION)
RECEIVE FUNCTION
3227
3225
NO
NORMAL RECEIVE
3229
YES
THE CORRESPONDING W02 PALLET ACTIVATE
3231
NO
W03 PALLET ACTIVATE ?
3233
YES
W03 PALLET ACTIVATE
3235

FIG. 33

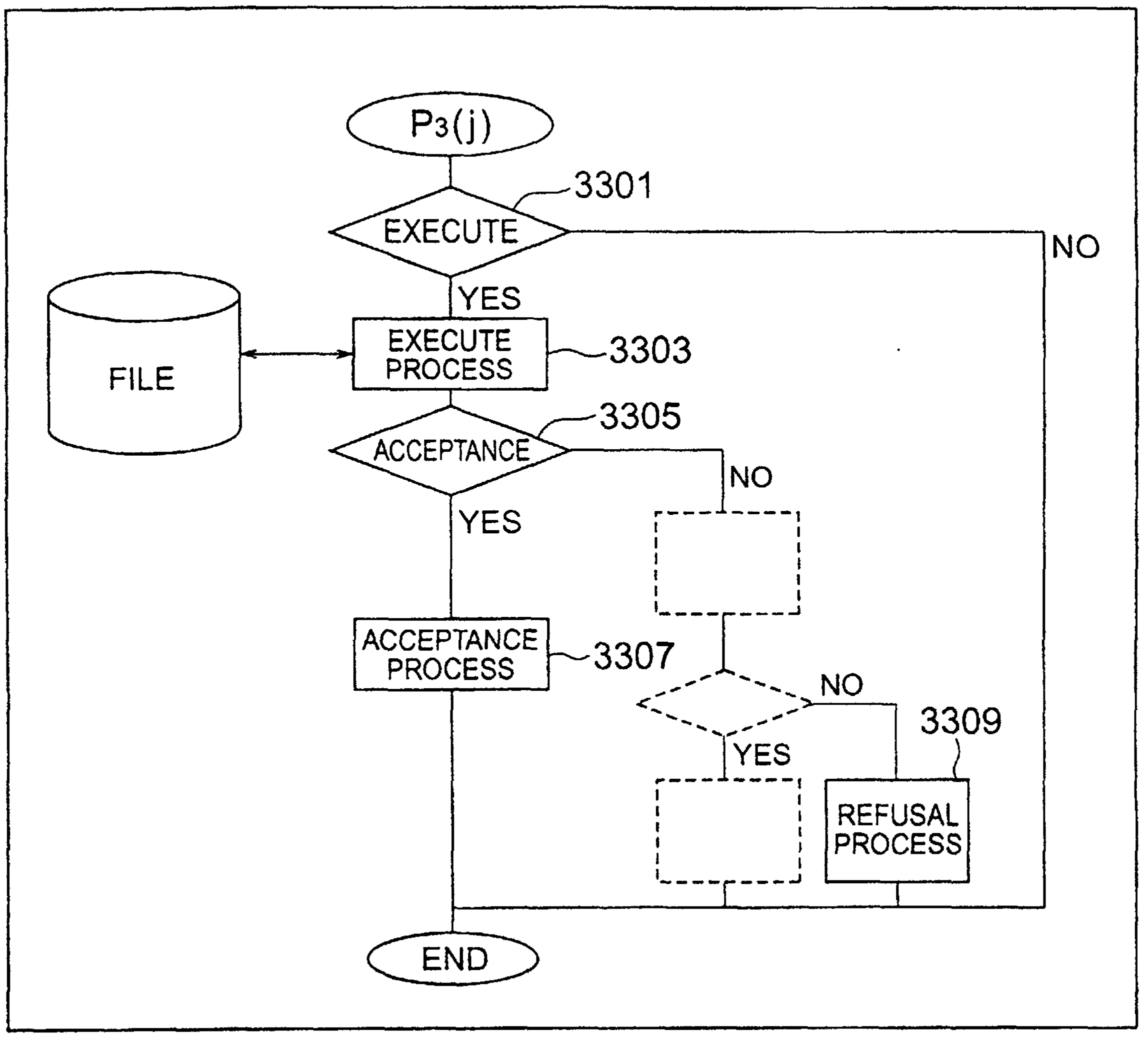

P3(j)
3301
EXECUTE
NO
YES
FILE
EXECUTE PROCESS
3303
3305
ACCEPTANCE
NO
YES
ACCEPTANCE PROCESS
3307
NO
3309
YES
REFUSAL PROCESS
END

FIG. 34

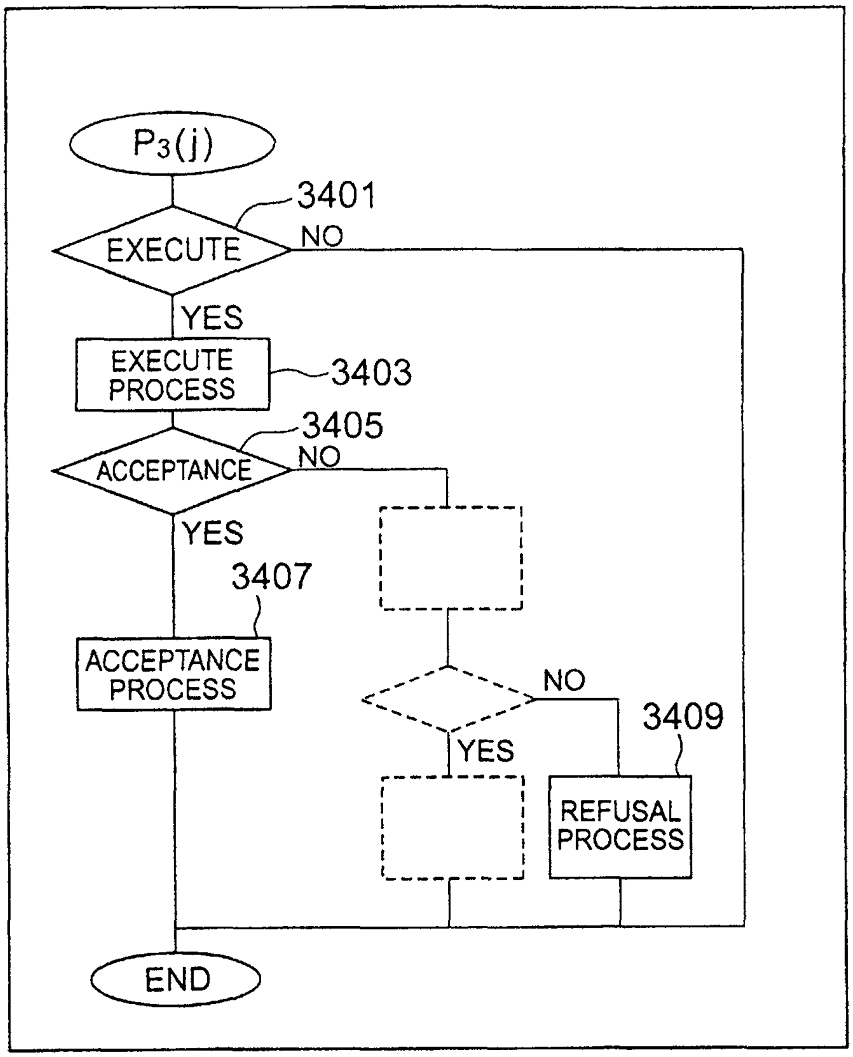
P3(j)
3401
EXECUTE
NO
YES
EXECUTE PROCESS
3403
3405
ACCEPTANCE
NO
YES
3407
ACCEPTANCE PROCESS
NO
3409
YES
REFUSAL PROCESS
END

FIG. 35

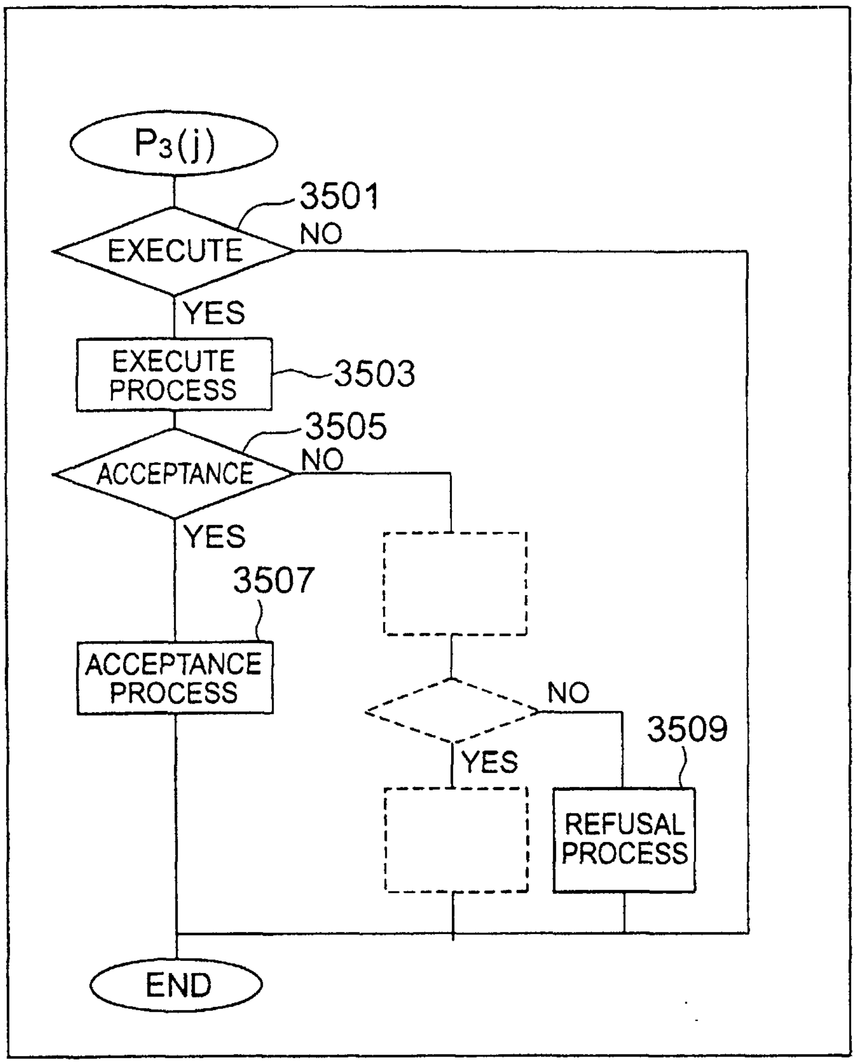
P3(j)
3501
EXECUTE
NO
YES
EXECUTE PROCESS
3503
3505
ACCEPTANCE
NO
YES
3507
ACCEPTANCE PROCESS
NO
3509
YES
REFUSAL PROCESS
END

FIG. 36

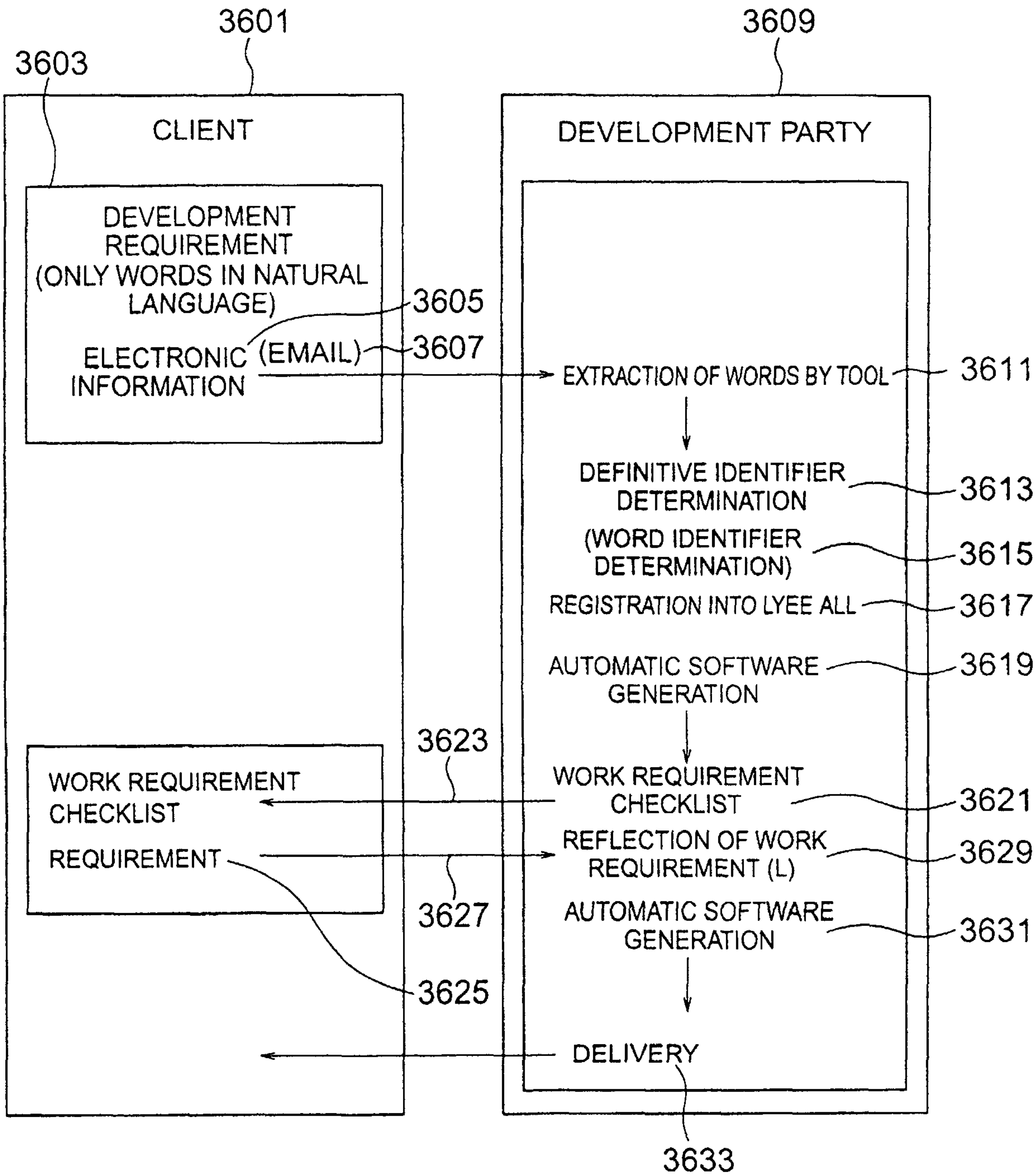
3601
3603
CLIENT
DEVELOPMENT REQUIREMENT (ONLY WORDS IN NATURAL LANGUAGE)
3605
ELECTRONIC INFORMATION
(EMAIL)
3607
3609
DEVELOPMENT PARTY
EXTRACTION OF WORDS BY TOOL
3611
DEFINITIVE IDENTIFIER DETERMINATION
3613
(WORD IDENTIFIER DETERMINATION)
3615
REGISTRATION INTO LYEE ALL
3617
AUTOMATIC SOFTWARE GENERATION
3619
3623
WORK REQUIREMENT CHECKLIST
WORK REQUIREMENT CHECKLIST
3621
REQUIREMENT
REFLECTION OF WORK REQUIREMENT (L)
3629
3627
AUTOMATIC SOFTWARE GENERATION
3631
3625
DELIVERY
3633

FIG. 37

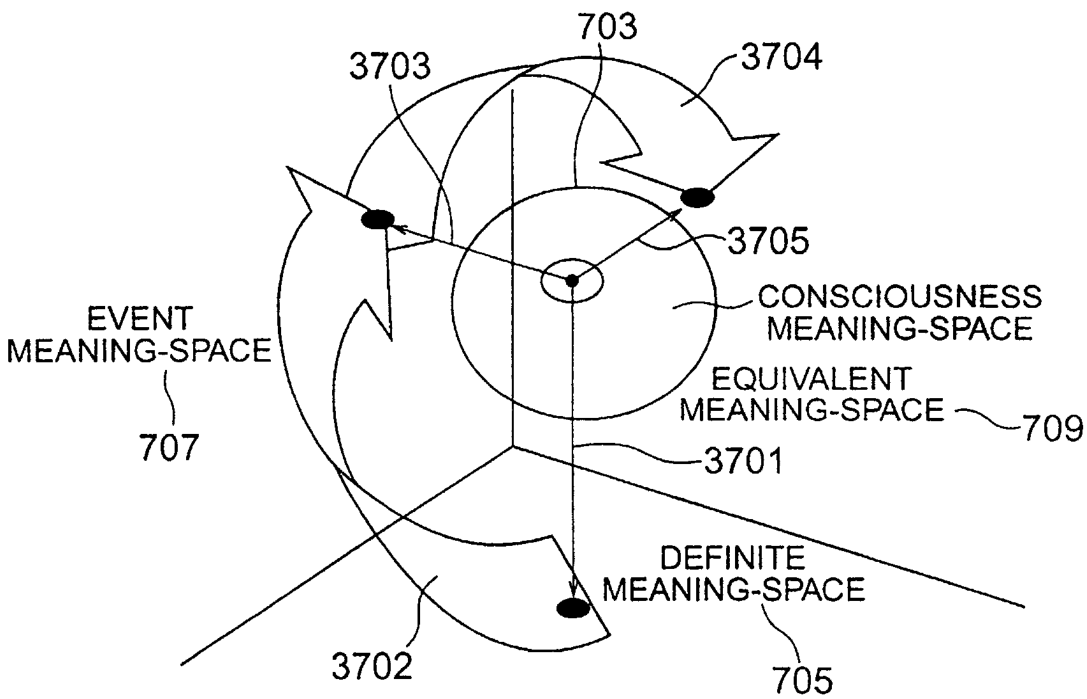
703
3703
3704
3705
CONSCIOUSNESS
MEANING-SPACE
EVENT
MEANING-SPACE
707
EQUIVALENT
MEANING-SPACE
709
3701
DEFINITE
MEANING-SPACE
3702
705

FIG. 38

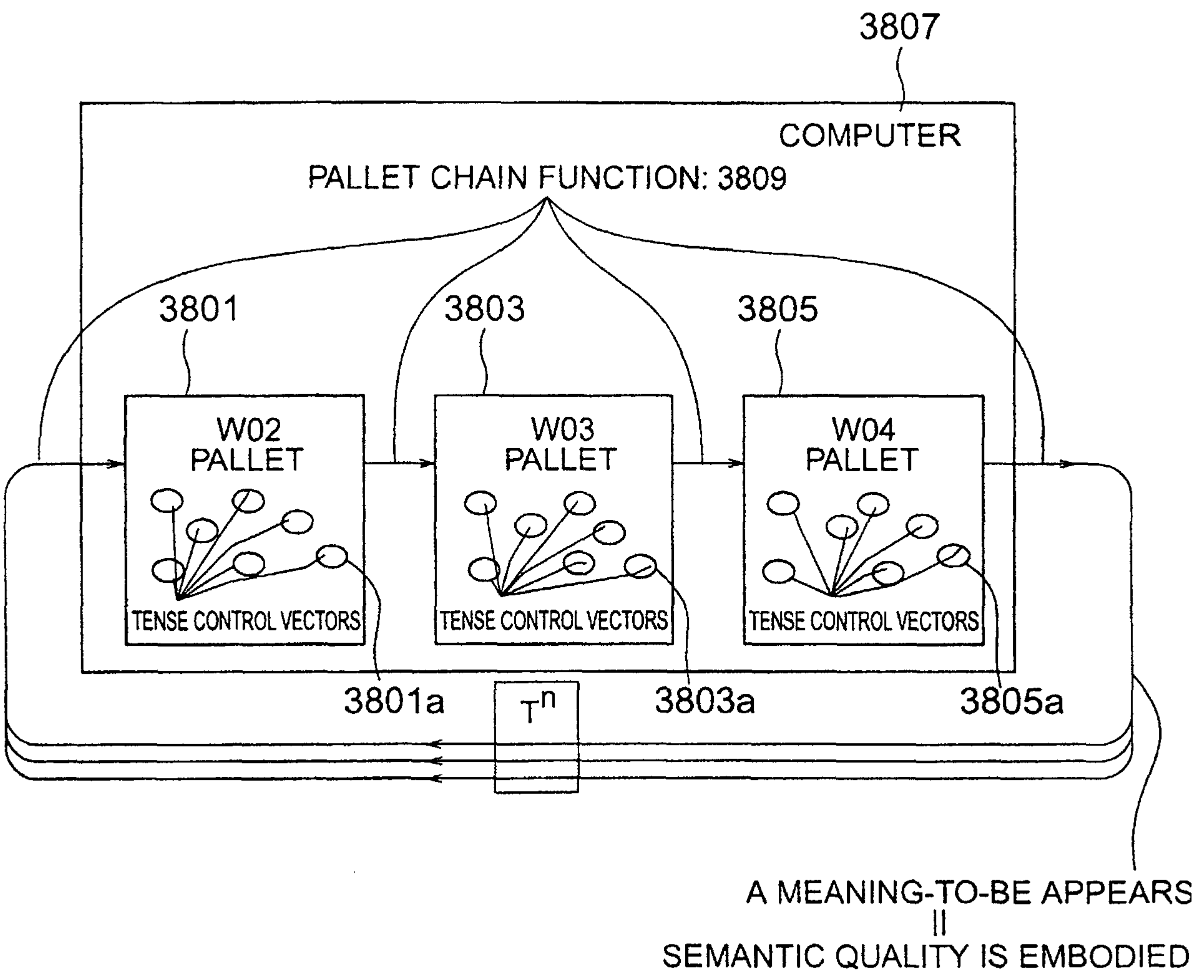
3807
COMPUTER
PALLET CHAIN FUNCTION: 3809
3801
3803
3805
W02
PALLET
W03
PALLET
W04
PALLET
TENSE CONTROL VECTORS
TENSE CONTROL VECTORS
TENSE CONTROL VECTORS
3801a
T^n
3803a
3805a
A MEANING-TO-BE APPEARS
||
SEMANTIC QUALITY IS EMBODIED

FIG. 39

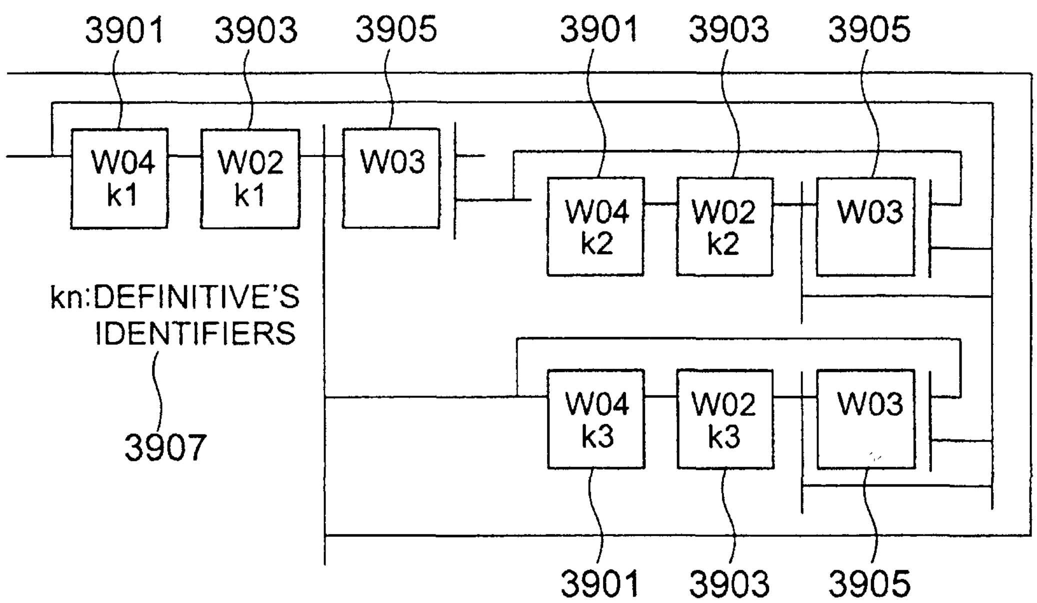
3901
3903
3905
3901
3903
3905
W04
k1
W02
k1
W03
W04
k2
W02
k2
W03
kn:DEFINITIVE'S
IDENTIFIERS
3907
W04
k3
W02
k3
W03
3901
3903
3905

FIG. 40

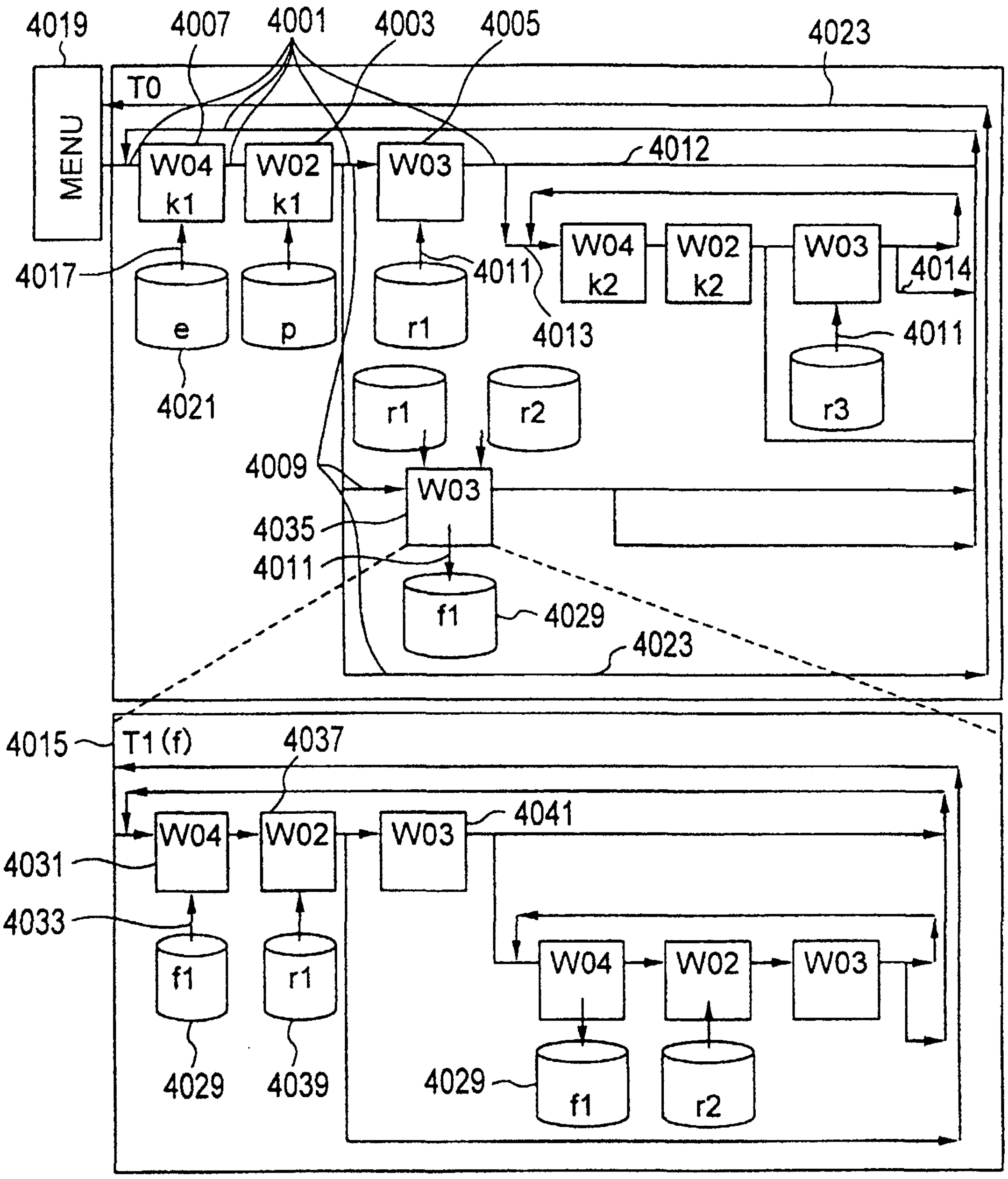

4019
4007
4001
4003
4005
4023
T0
MENU
W04
k1
W02
k1
W03
4012
W04
k2
W02
k2
W03
4014
4017
4011
4013
4011
e
p
r1
r3
4021
r1
r2
4009
W03
4035
4011
f1
4029
4023
4015
T1 (f)
4037
W04
W02
W03
4041
4031
4033
f1
r1
W04
W02
W03
4029
4039
4029
f1
r2

FIG. 41

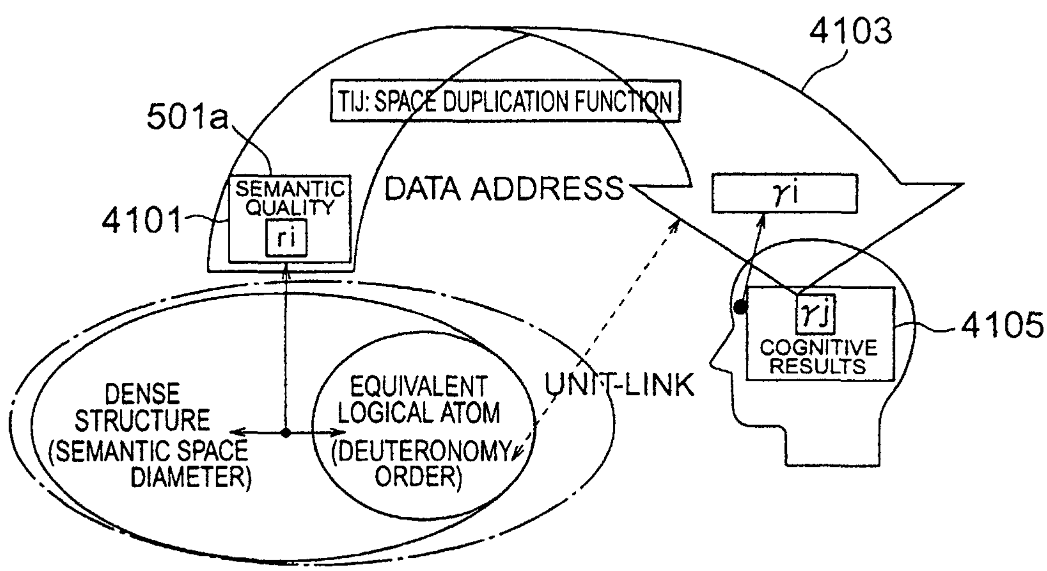
4103
TIJ: SPACE DUPLICATION FUNCTION
501a
SEMANTIC QUALITY
ri
4101
DATA ADDRESS
γi
γj
COGNITIVE RESULTS
4105
DENSE STRUCTURE (SEMANTIC SPACE DIAMETER)
EQUIVALENT LOGICAL ATOM (DEUTERONOMY ORDER)
UNIT-LINK

FIG. 42

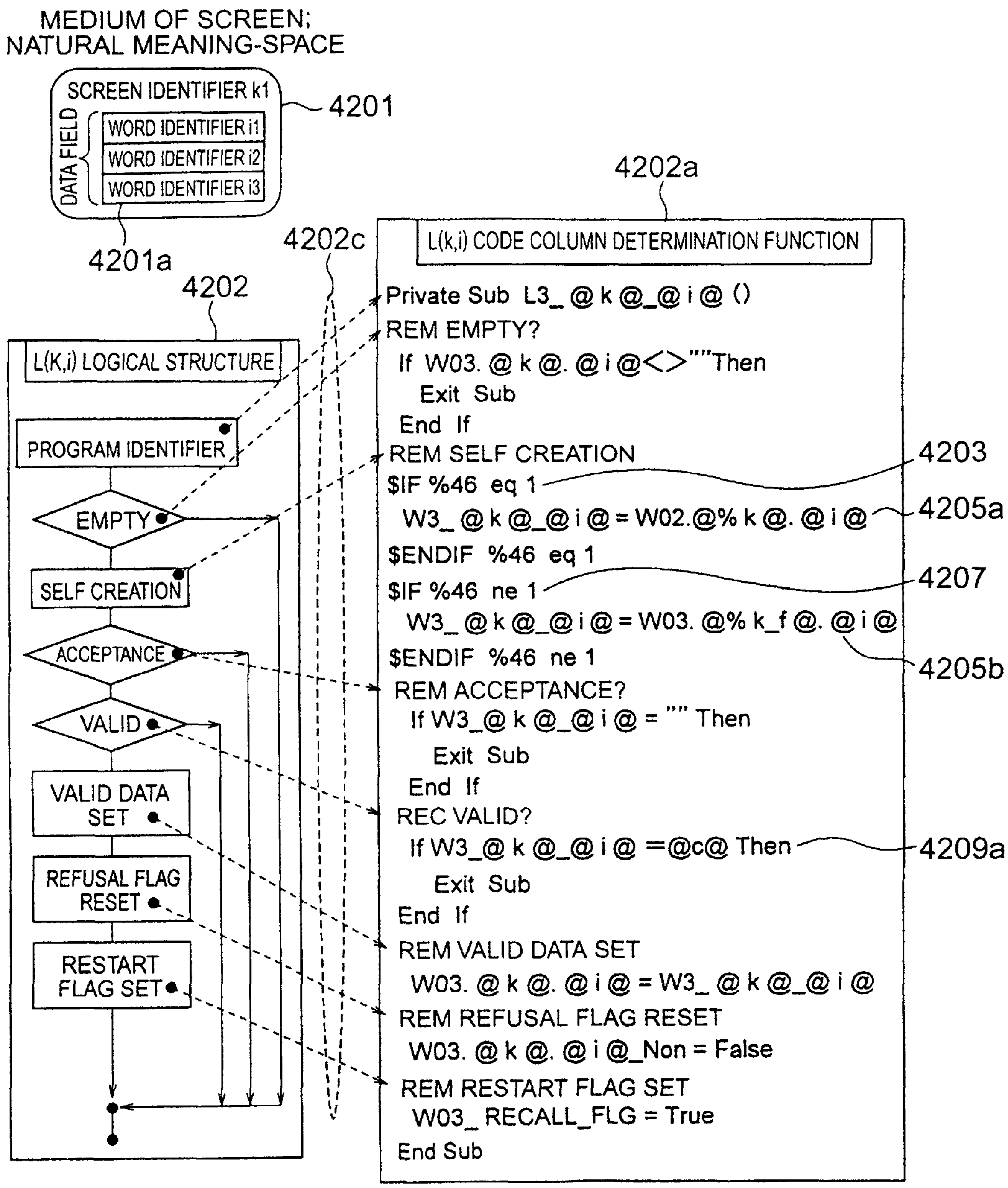
MEDIUM OF SCREEN;
NATURAL MEANING-SPACE
SCREEN IDENTIFIER k1
DATA FIELD
WORD IDENTIFIER i1
WORD IDENTIFIER i2
WORD IDENTIFIER i3
4201
4201a
4202
4202a
4202c
L(K,i) LOGICAL STRUCTURE
PROGRAM IDENTIFIER
EMPTY
SELF CREATION
ACCEPTANCE
VALID
VALID DATA SET
REFUSAL FLAG RESET
RESTART FLAG SET
L(k,i) CODE COLUMN DETERMINATION FUNCTION
Private Sub L3_@k@_@i@ ()
REM EMPTY?
If W03.@k@.@i@<>""Then
Exit Sub
End If
REM SELF CREATION
$IF %46 eq 1
W3_@k@_@i@ = W02.@%k@.@i@
$ENDIF %46 eq 1
$IF %46 ne 1
W3_@k@_@i@ = W03.@%k_f@.@i@
$ENDIF %46 ne 1
REM ACCEPTANCE?
If W3_@k@_@i@ = "" Then
Exit Sub
End If
REC VALID?
If W3_@k@_@i@ =@c@ Then
Exit Sub
End If
REM VALID DATA SET
W03.@k@.@i@ = W3_@k@_@i@
REM REFUSAL FLAG RESET
W03.@k@.@i@_Non = False
REM RESTART FLAG SET
W03_RECALL_FLG = True
End Sub
4203
4205a
4207
4205b
4209a

FIG. 43

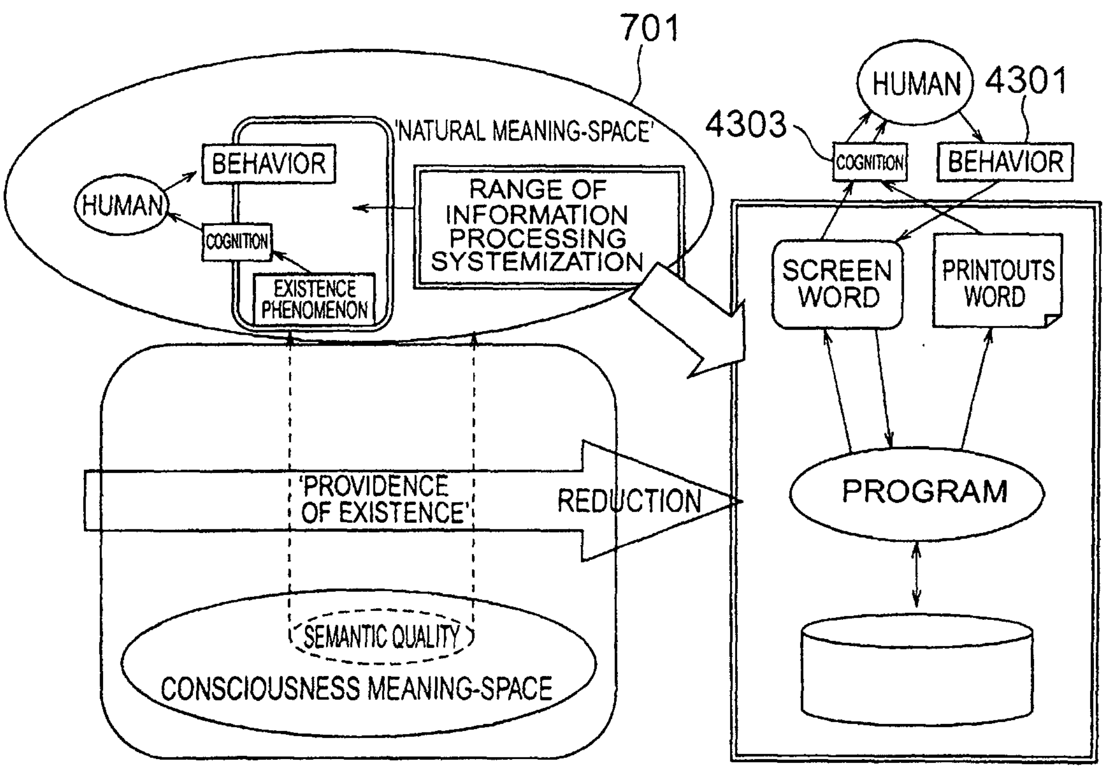
701
'NATURAL MEANING-SPACE'
BEHAVIOR
HUMAN
COGNITION
EXISTENCE PHENOMENON
RANGE OF INFORMATION PROCESSING SYSTEMIZATION
'PROVIDENCE OF EXISTENCE'
REDUCTION
SEMANTIC QUALITY
CONSCIOUSNESS MEANING-SPACE
HUMAN
4301
4303
COGNITION
BEHAVIOR
SCREEN WORD
PRINTOUTS WORD
PROGRAM

FIG. 44

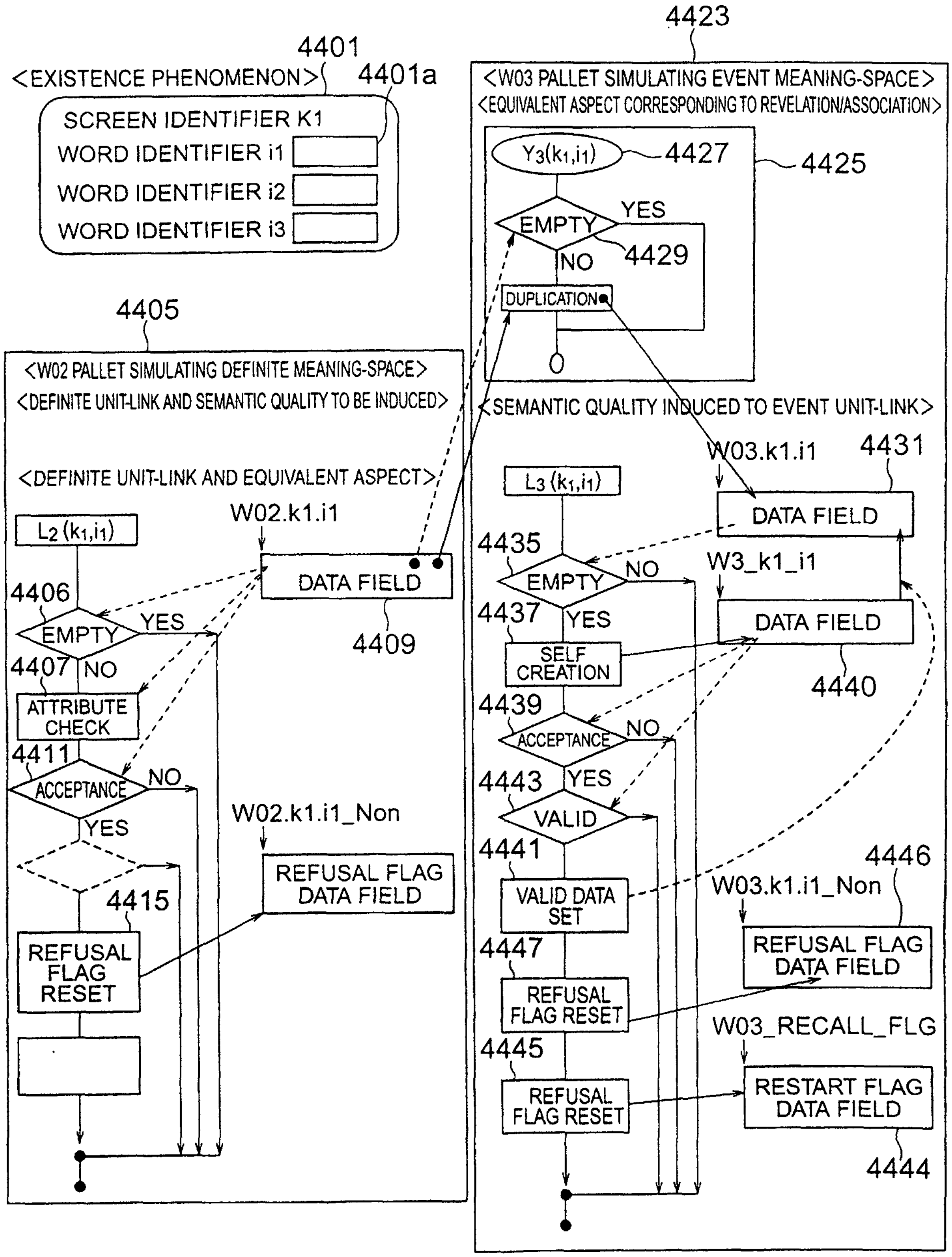
4401
<EXISTENCE PHENOMENON>
4401a
SCREEN IDENTIFIER K1
WORD IDENTIFIER i1
WORD IDENTIFIER i2
WORD IDENTIFIER i3
4405
<W02 PALLET SIMULATING DEFINITE MEANING-SPACE>
<DEFINITE UNIT-LINK AND SEMANTIC QUALITY TO BE INDUCED>
<DEFINITE UNIT-LINK AND EQUIVALENT ASPECT>
L2 (k1,i1)
W02.k1.i1
DATA FIELD
4409
4406
EMPTY
YES
4407
NO
ATTRIBUTE CHECK
4411
ACCEPTANCE
NO
YES
W02.k1.i1_Non
REFUSAL FLAG DATA FIELD
4415
REFUSAL FLAG RESET
4423
<W03 PALLET SIMULATING EVENT MEANING-SPACE>
<EQUIVALENT ASPECT CORRESPONDING TO REVELATION/ASSOCIATION>
Y3(k1,i1)
4427
4425
EMPTY
YES
4429
NO
DUPLICATION
0
<SEMANTIC QUALITY INDUCED TO EVENT UNIT-LINK>
W03.k1.i1
4431
L3 (k1,i1)
DATA FIELD
4435
EMPTY
NO
W3_k1_i1
4437
YES
DATA FIELD
SELF CREATION
4440
4439
ACCEPTANCE
NO
4443
YES
VALID
4441
4446
W03.k1.i1_Non
VALID DATA SET
REFUSAL FLAG DATA FIELD
4447
REFUSAL FLAG RESET
W03_RECALL_FLG
4445
REFUSAL FLAG RESET
RESTART FLAG DATA FIELD
4444

FIG. 45

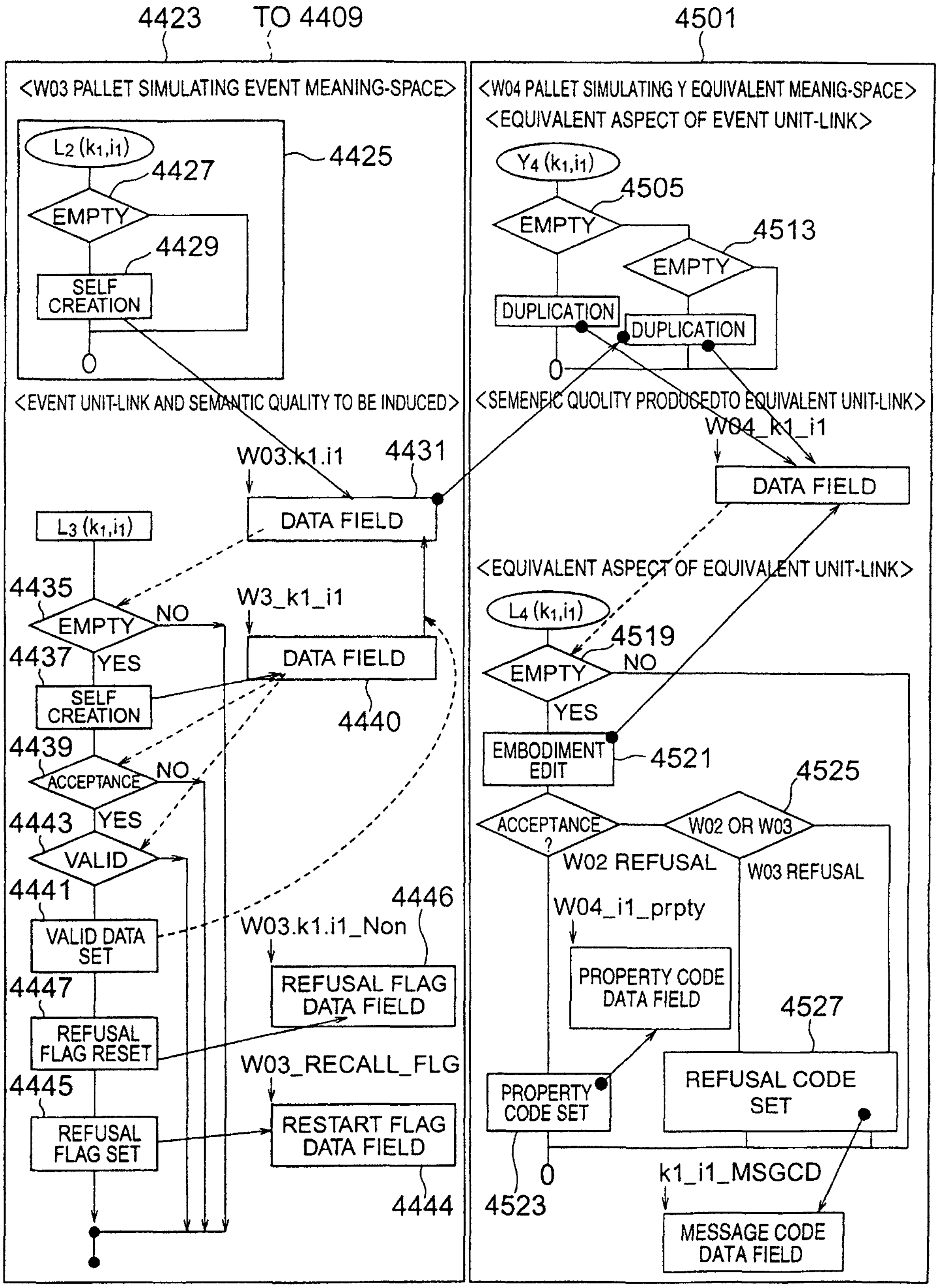
4423
TO 4409
4501
<W03 PALLET SIMULATING EVENT MEANING-SPACE>
L2 (k1,i1)
4427
4425
EMPTY
4429
SELF CREATION
<EVENT UNIT-LINK AND SEMANTIC QUALITY TO BE INDUCED>
W03.k1.i1
4431
DATA FIELD
L3 (k1,i1)
4435
EMPTY
NO
W3_k1_i1
DATA FIELD
4437
YES
SELF CREATION
4440
4439
ACCEPTANCE
NO
4443
YES
VALID
4441
VALID DATA SET
4446
W03.k1.i1_Non
REFUSAL FLAG DATA FIELD
4447
REFUSAL FLAG RESET
W03_RECALL_FLG
4445
REFUSAL FLAG SET
RESTART FLAG DATA FIELD
4444
<W04 PALLET SIMULATING Y EQUIVALENT MEANIG-SPACE>
<EQUIVALENT ASPECT OF EVENT UNIT-LINK>
Y4 (k1,i1)
4505
EMPTY
4513
EMPTY
DUPLICATION
DUPLICATION
<SEMENFIC QUOLITY PRODUCEDTO EQUIVALENT UNIT-LINK>
W04_k1_i1
DATA FIELD
<EQUIVALENT ASPECT OF EQUIVALENT UNIT-LINK>
L4 (k1,i1)
4519
EMPTY
NO
YES
EMBODIMENT EDIT
4521
4525
ACCEPTANCE ?
W02 OR W03
W02 REFUSAL
W03 REFUSAL
W04_i1_prpty
PROPERTY CODE DATA FIELD
4527
PROPERTY CODE SET
REFUSAL CODE SET
k1_i1_MSGCD
4523
MESSAGE CODE DATA FIELD

FIG. 46

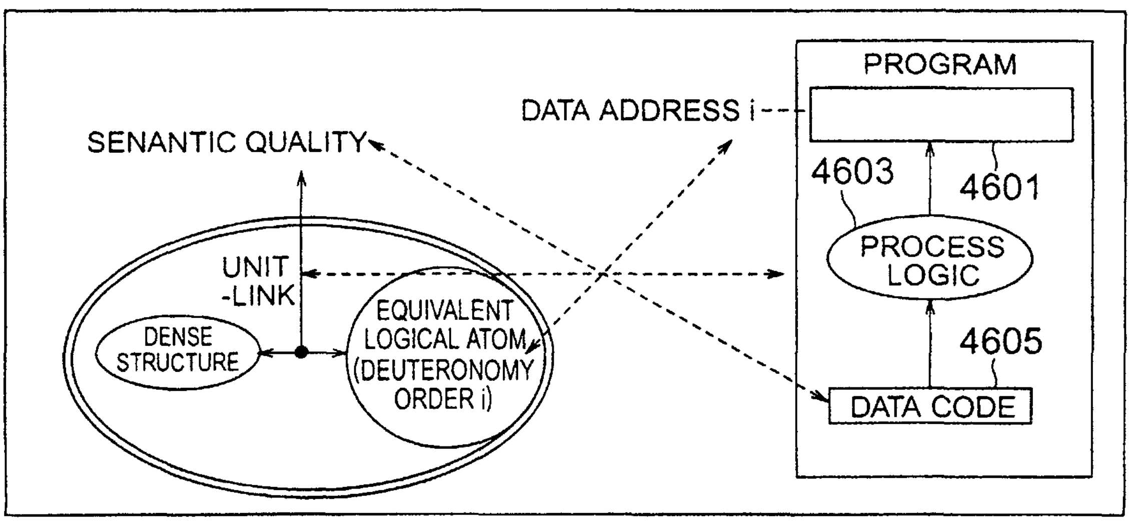
PROGRAM
DATA ADDRESS i
SENANTIC QUALITY
4603
4601
UNIT
-LINK
PROCESS
LOGIC
EQUIVALENT
LOGICAL ATOM
(DEUTERONOMY
ORDER i)
DENSE
STRUCTURE
4605
DATA CODE

FIG. 47

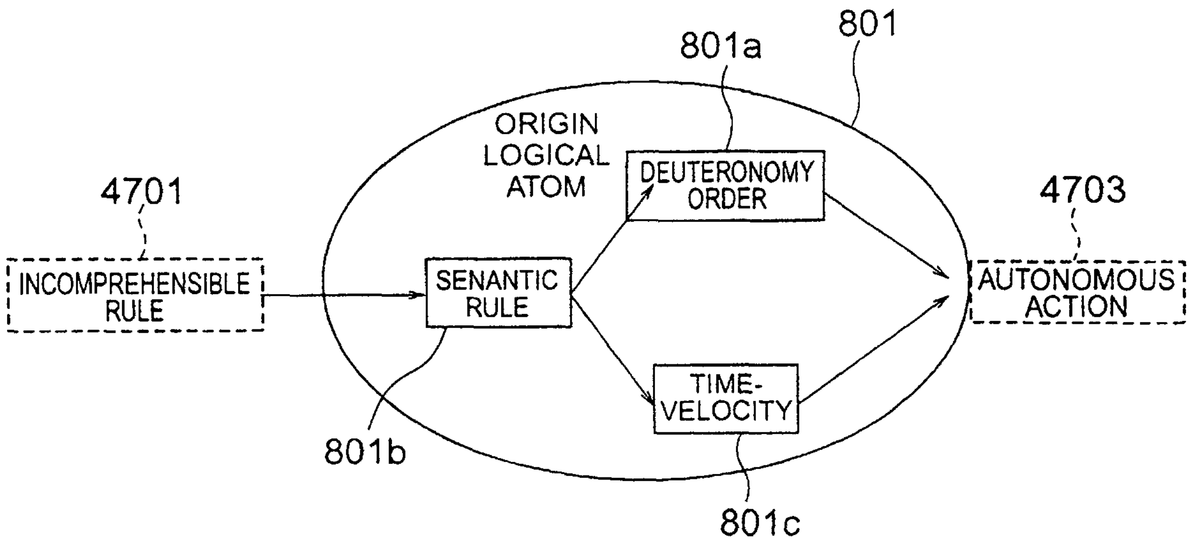
801
801a
ORIGIN
LOGICAL
ATOM
DEUTERONOMY
ORDER
4701
INCOMPREHENSIBLE
RULE
SENANTIC
RULE
4703
AUTONOMOUS
ACTION
TIME-
VELOCITY
801b
801c

FIG. 48

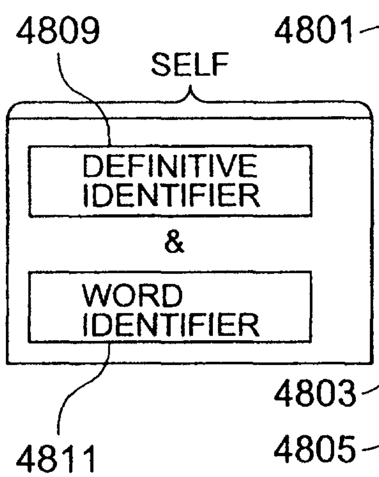


4801 4803 4805 4807

| | $L_2(k,i)$ | $Y_3(k,i)$ | $L_3(k,i)$ | $Y_4(k,i)$ | $L_4(k,i)$ |
|---|---|---|---|---|---|
| PROGRAM IDENTIFIER | SELF | SELF | SELF | SELF | SELF |
| DATA ADDRESS | SELF ADDRESS | SELF ADDRESS | SELF ADDRESS | SELF ADDRESS | SELF ADDRESS |
| PROCESS LOGIC | SELF CHECK | SELF DUPLI-CATE | SELF PRODUCE | SELF DUPLI-CATE | SELF EDIT |
| DATA CODE | SELF ATTRIB-UTE | SELF PRES-ENCE | SELF | SELF PRES-ENCE | SELF |

FIG. 49

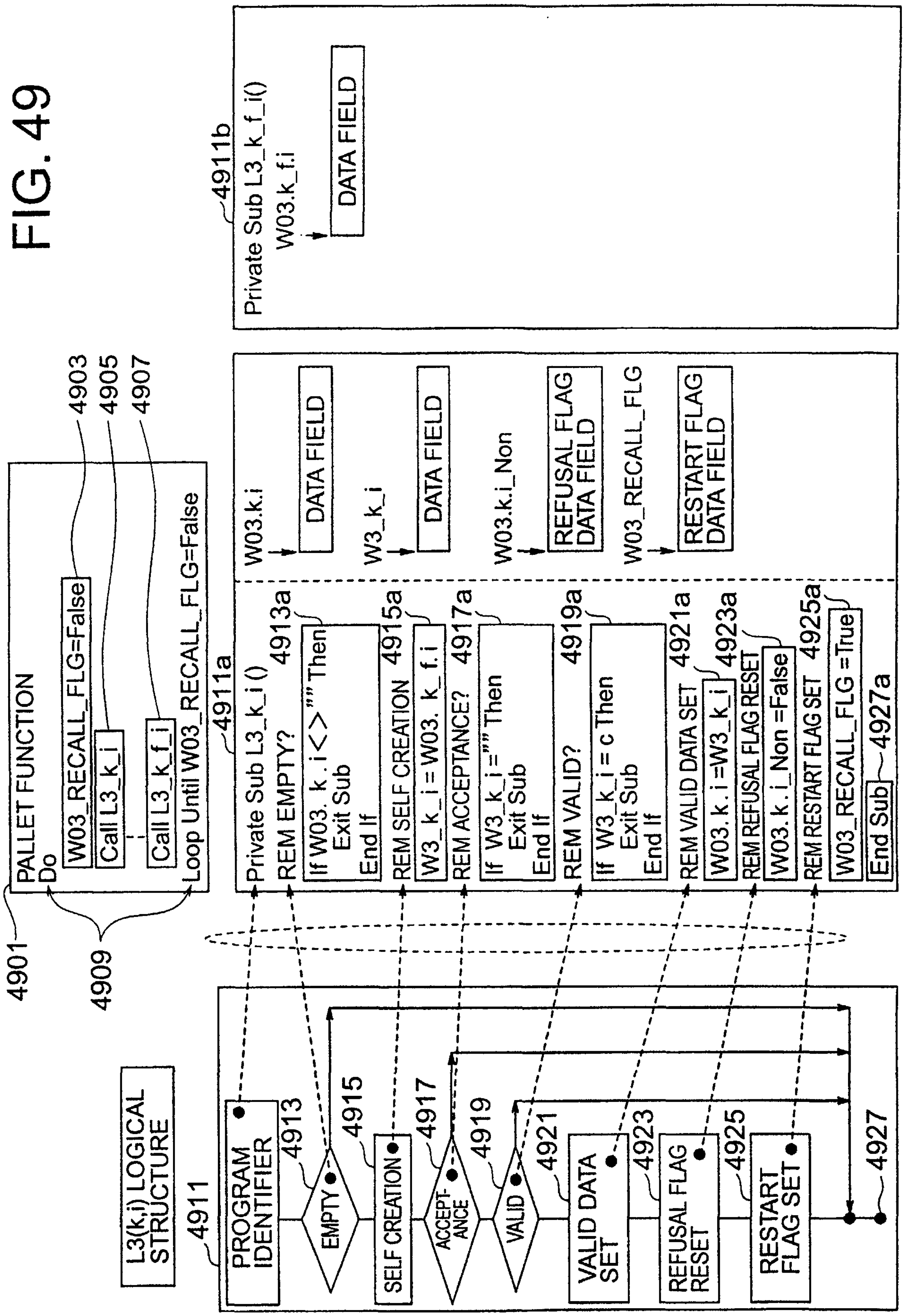

4901
PALLET FUNCTION
Do
W03_RECALL_FLG=False
Call L3_k_i
Call L3_k_f_i
Loop Until W03_RECALL_FLG=False
4903
4905
4907
4909
4911a
Private Sub L3_k_i ()
REM EMPTY?
4913a
If W03. k . i<>"" Then
Exit Sub
End If
REM SELF CREATION
4915a
W3_k_i = W03. k_f. i
REM ACCEPTANCE?
4917a
If W3_k_i ="" Then
Exit Sub
End If
REM VALID?
4919a
If W3_k_i = c Then
Exit Sub
End If
REM VALID DATA SET
4921a
W03. k. i =W3_k_i
REM REFUSAL FLAG RESET
4923a
W03. k. i_Non =False
REM RESTART FLAG SET
4925a
W03_RECALL_FLG =True
End Sub
4927a
W03.k.i
DATA FIELD
W3_k_i
DATA FIELD
W03.k.i_Non
REFUSAL FLAG DATA FIELD
W03_RECALL_FLG
RESTART FLAG DATA FIELD
4911b
Private Sub L3_k_f_i()
W03.k_f.i
DATA FIELD
L3(k,i) LOGICAL STRUCTURE
4911
PROGRAM IDENTIFIER
4913
EMPTY
4915
SELF CREATION
4917
ACCEPT-ANCE
4919
VALID
4921
VALID DATA SET
4923
REFUSAL FLAG RESET
4925
RESTART FLAG SET
4927

FIG. 50

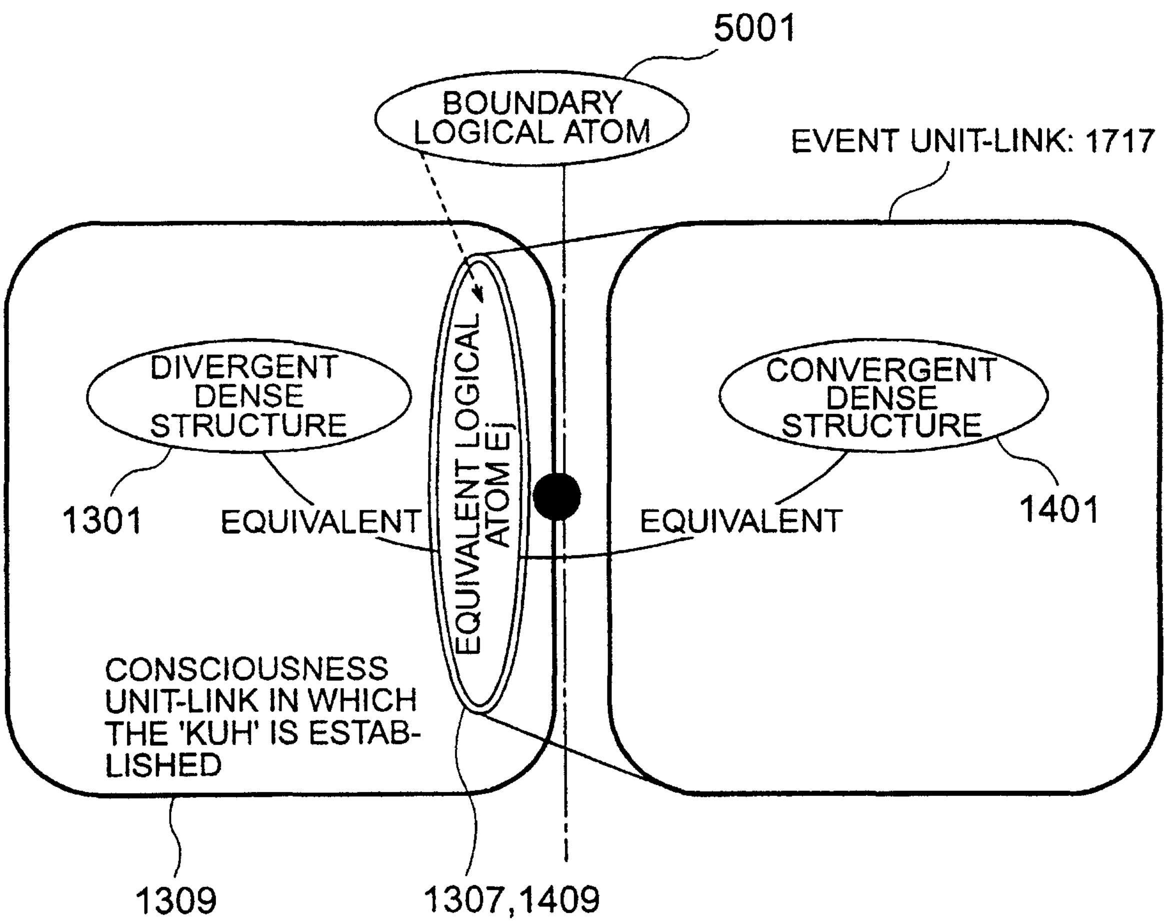
5001
BOUNDARY LOGICAL ATOM
EVENT UNIT-LINK: 1717
DIVERGENT DENSE STRUCTURE
1301
EQUIVALENT
EQUIVALENT LOGICAL ATOM Ej
CONVERGENT DENSE STRUCTURE
1401
EQUIVALENT
CONSCIOUSNESS UNIT-LINK IN WHICH THE 'KUH' IS ESTABLISHED
1309
1307,1409

FIG. 51

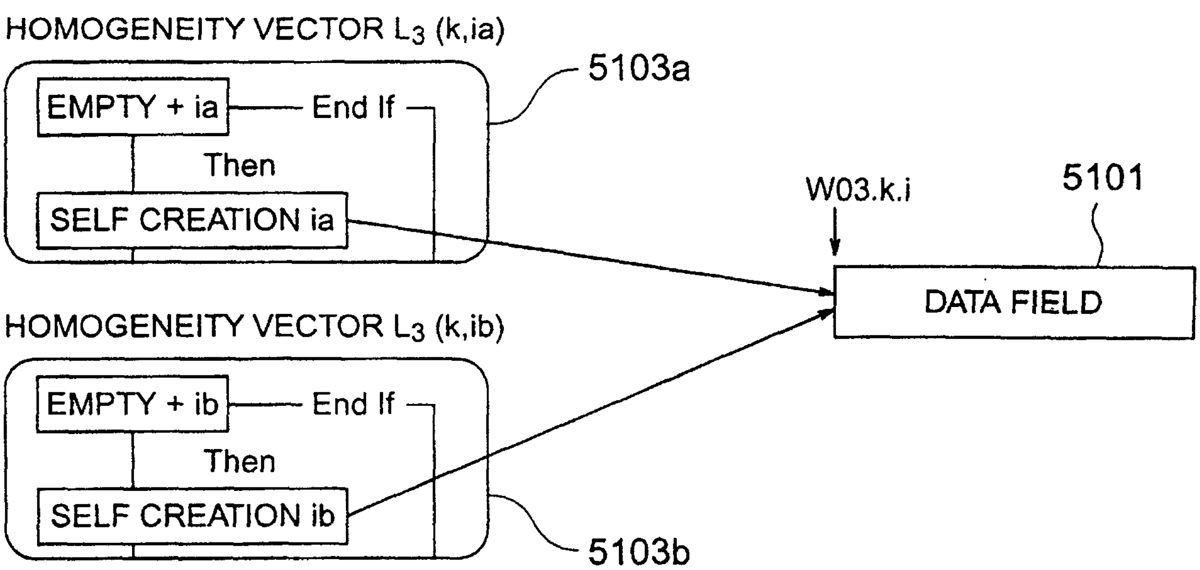
HOMOGENEITY VECTOR $L_3$ (k,ia)
5103a
EMPTY + ia
End If
Then
SELF CREATION ia
W03.k.i
5101
DATA FIELD
HOMOGENEITY VECTOR $L_3$ (k,ib)
EMPTY + ib
End If
Then
SELF CREATION ib
5103b

FIG. 52

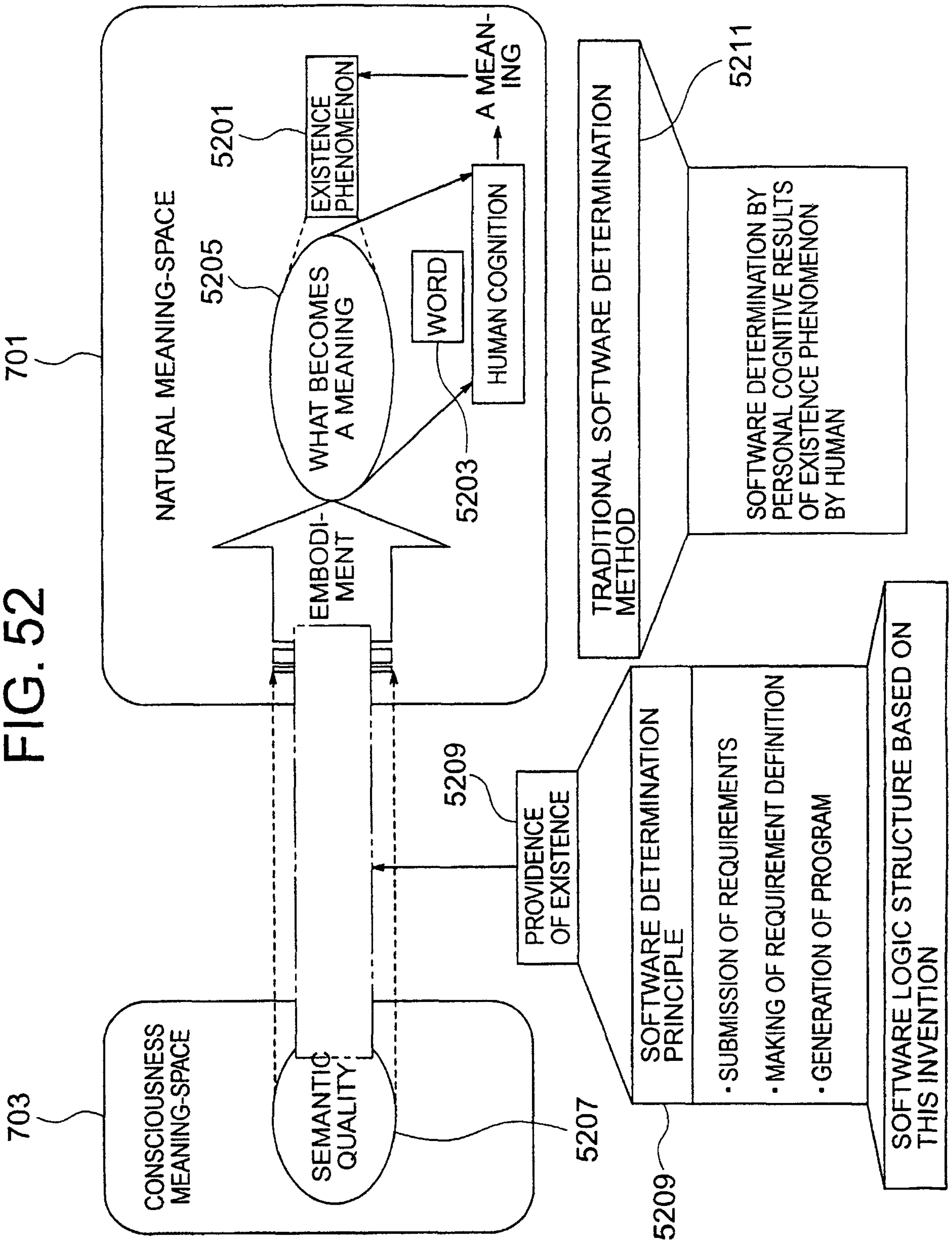
701
NATURAL MEANING-SPACE
5205
WHAT BECOMES A MEANING
5201
EXISTENCE PHENOMENON
A MEAN-ING
WORD
HUMAN COGNITION
5203
EMBODI-MENT
703
CONSCIOUSNESS MEANING-SPACE
SEMANTIC QUALITY
5207
5209
PROVIDENCE OF EXISTENCE
TRADITIONAL SOFTWARE DETERMINATION METHOD
5211
SOFTWARE DETERMINATION BY PERSONAL COGNITIVE RESULTS OF EXISTENCE PHENOMENON BY HUMAN
SOFTWARE DETERMINATION PRINCIPLE
· SUBMISSION OF REQUIREMENTS
· MAKING OF REQUIREMENT DEFINITION
· GENERATION OF PROGRAM
SOFTWARE LOGIC STRUCTURE BASED ON THIS INVENTION
5209

FIG. 53

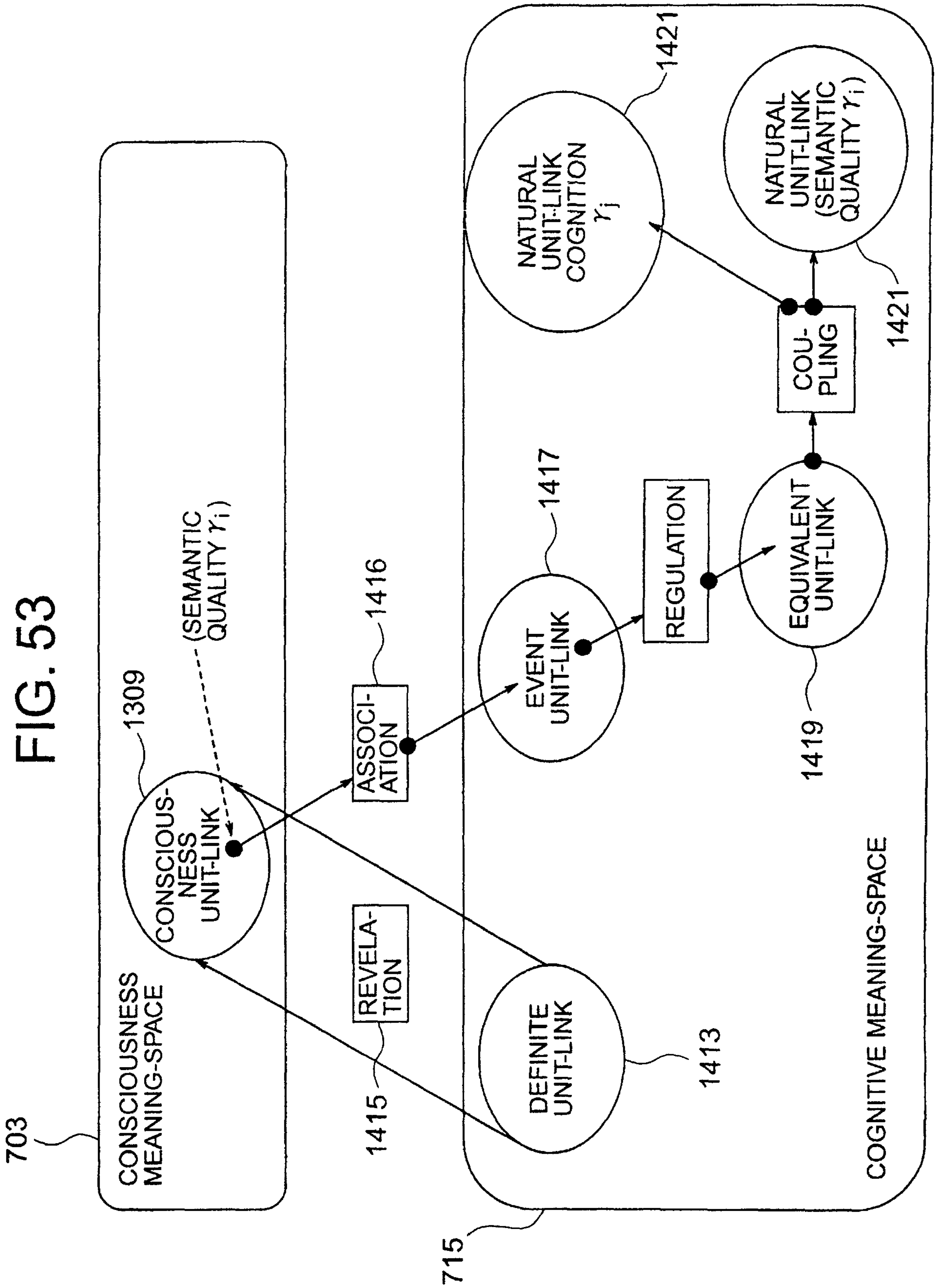
703
CONSCIOUSNESS MEANING-SPACE
CONSCIOUS-NESS UNIT-LINK
1309
(SEMANTIC QUALITY $\gamma_i$)
REVELA-TION
1415
ASSOCI-ATION
1416
DEFINITE UNIT-LINK
1413
EVENT UNIT-LINK
1417
REGULATION
EQUIVALENT UNIT-LINK
1419
COU-PLING
NATURAL UNIT-LINK COGNITION $\gamma_j$
1421
NATURAL UNIT-LINK (SEMANTIC QUALITY $\gamma_i$)
1421
COGNITIVE MEANING-SPACE
715

FIG. 54

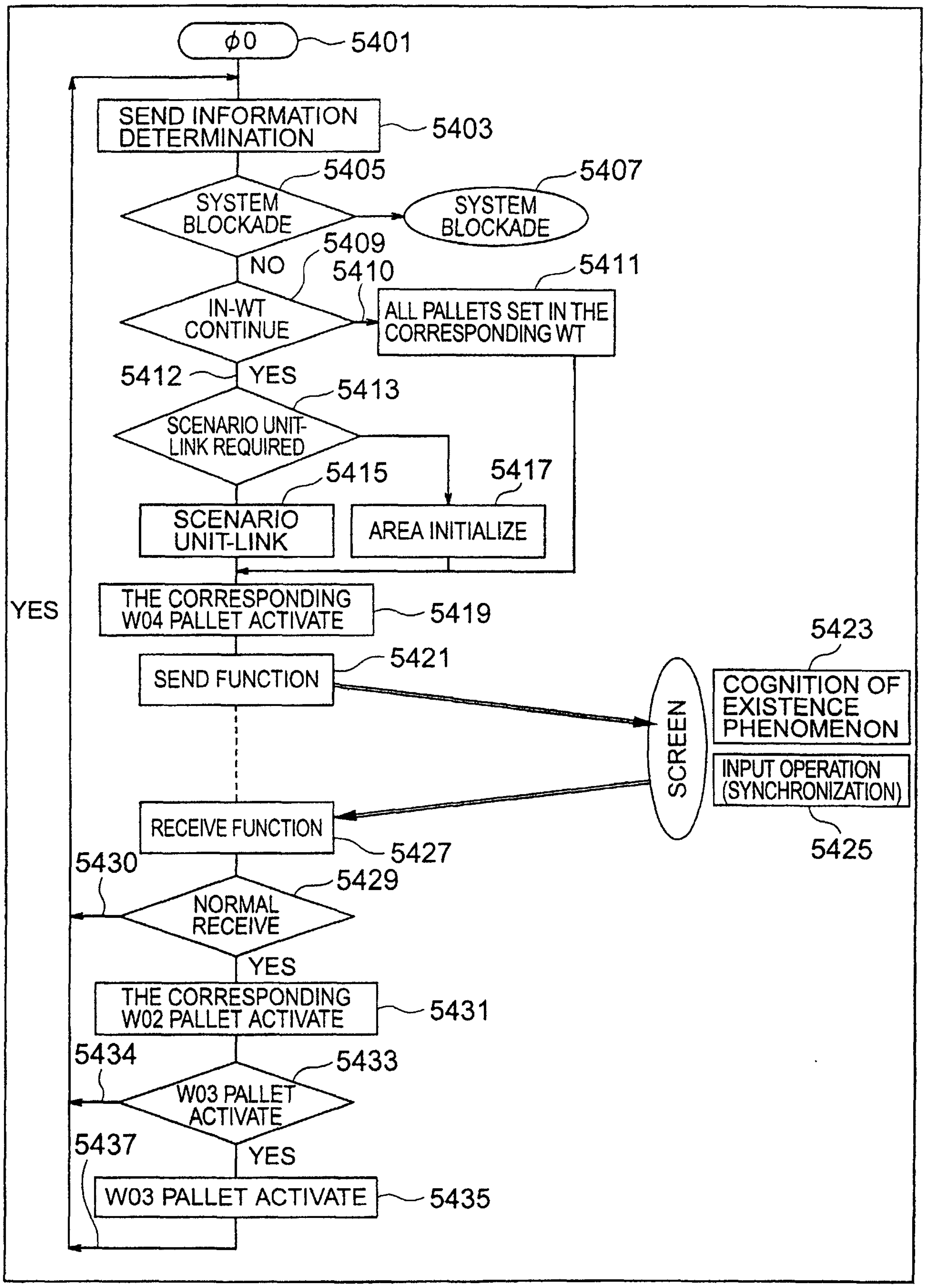

φ0
5401
SEND INFORMATION DETERMINATION
5403
5405
SYSTEM BLOCKADE
5407
SYSTEM BLOCKADE
NO
5409
5410
IN-WT CONTINUE
5411
ALL PALLETS SET IN THE CORRESPONDING WT
5412
YES
5413
SCENARIO UNIT-LINK REQUIRED
5415
5417
SCENARIO UNIT-LINK
AREA INITIALIZE
YES
THE CORRESPONDING W04 PALLET ACTIVATE
5419
5423
SEND FUNCTION
5421
SCREEN
COGNITION OF EXISTENCE PHENOMENON
INPUT OPERATION (SYNCHRONIZATION)
5425
RECEIVE FUNCTION
5427
5430
5429
NORMAL RECEIVE
YES
THE CORRESPONDING W02 PALLET ACTIVATE
5431
5434
5433
W03 PALLET ACTIVATE
5437
YES
W03 PALLET ACTIVATE
5435

FIG. 55

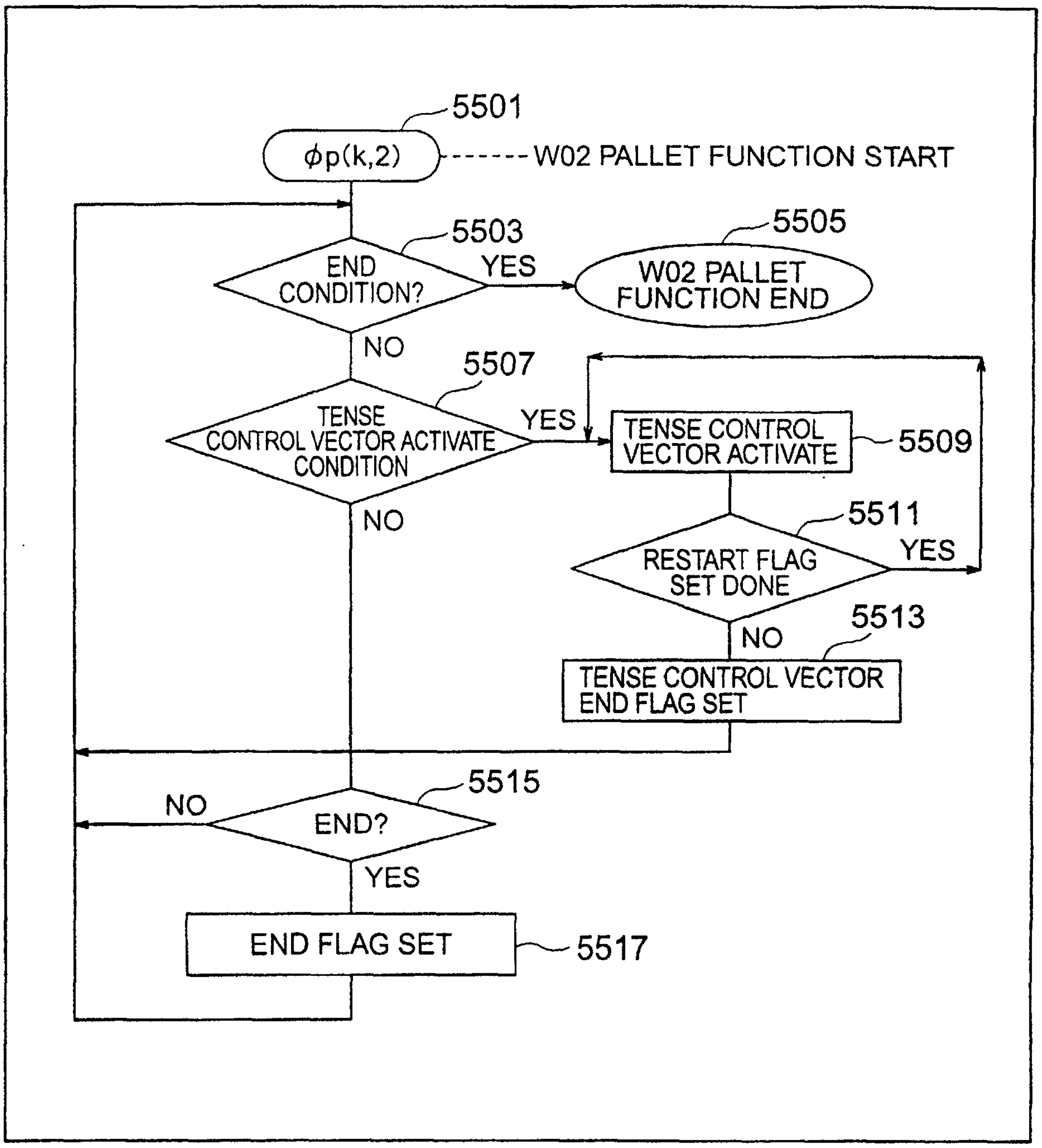
5501
φp(k,2)
W02 PALLET FUNCTION START
5503
END CONDITION?
YES
5505
W02 PALLET FUNCTION END
NO
5507
TENSE CONTROL VECTOR ACTIVATE CONDITION
YES
TENSE CONTROL VECTOR ACTIVATE
5509
NO
5511
RESTART FLAG SET DONE
YES
NO
5513
TENSE CONTROL VECTOR END FLAG SET
5515
NO
END?
YES
END FLAG SET
5517

FIG. 56

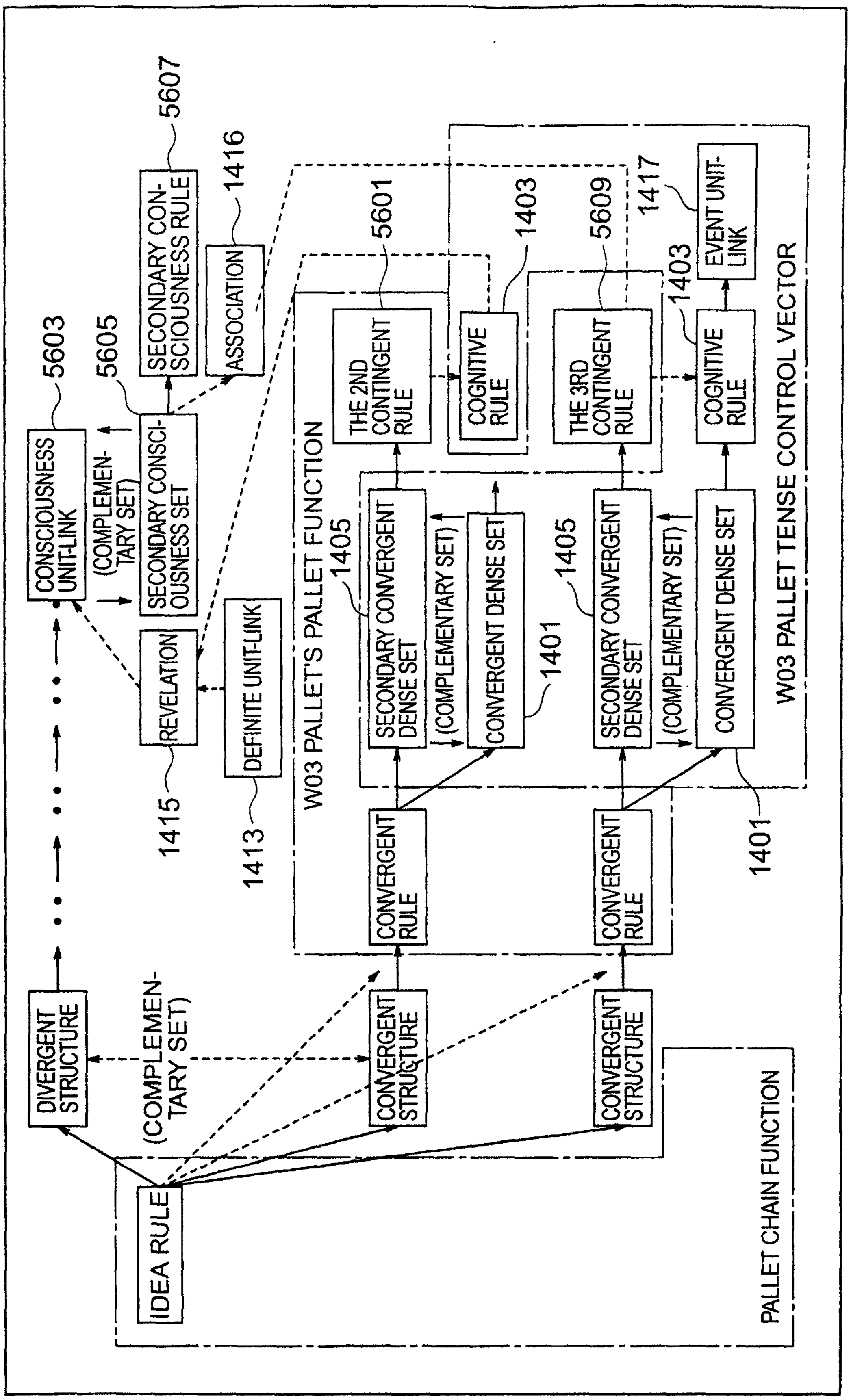

IDEA RULE
DIVERGENT STRUCTURE
(COMPLEMENTARY SET)
CONVERGENT STRUCTURE
CONVERGENT STRUCTURE
PALLET CHAIN FUNCTION
CONVERGENT RULE
CONVERGENT RULE
W03 PALLET'S PALLET FUNCTION
SECONDARY CONVERGENT DENSE SET
(COMPLEMENTARY SET)
CONVERGENT DENSE SET
SECONDARY CONVERGENT DENSE SET
(COMPLEMENTARY SET)
CONVERGENT DENSE SET
W03 PALLET TENSE CONTROL VECTOR
THE 2ND CONTINGENT RULE
THE 3RD CONTINGENT RULE
COGNITIVE RULE
COGNITIVE RULE
EVENT UNIT-LINK
REVELATION
DEFINITE UNIT-LINK
CONSCIOUSNESS UNIT-LINK
(COMPLEMENTARY SET)
SECONDARY CONSCIOUSNESS SET
SECONDARY CONSCIOUSNESS RULE
ASSOCIATION
5607
1416
5603
5605
5601
1403
5609
1417
1403
1405
1405
1401
1401
1415
1413

# FIG. 57

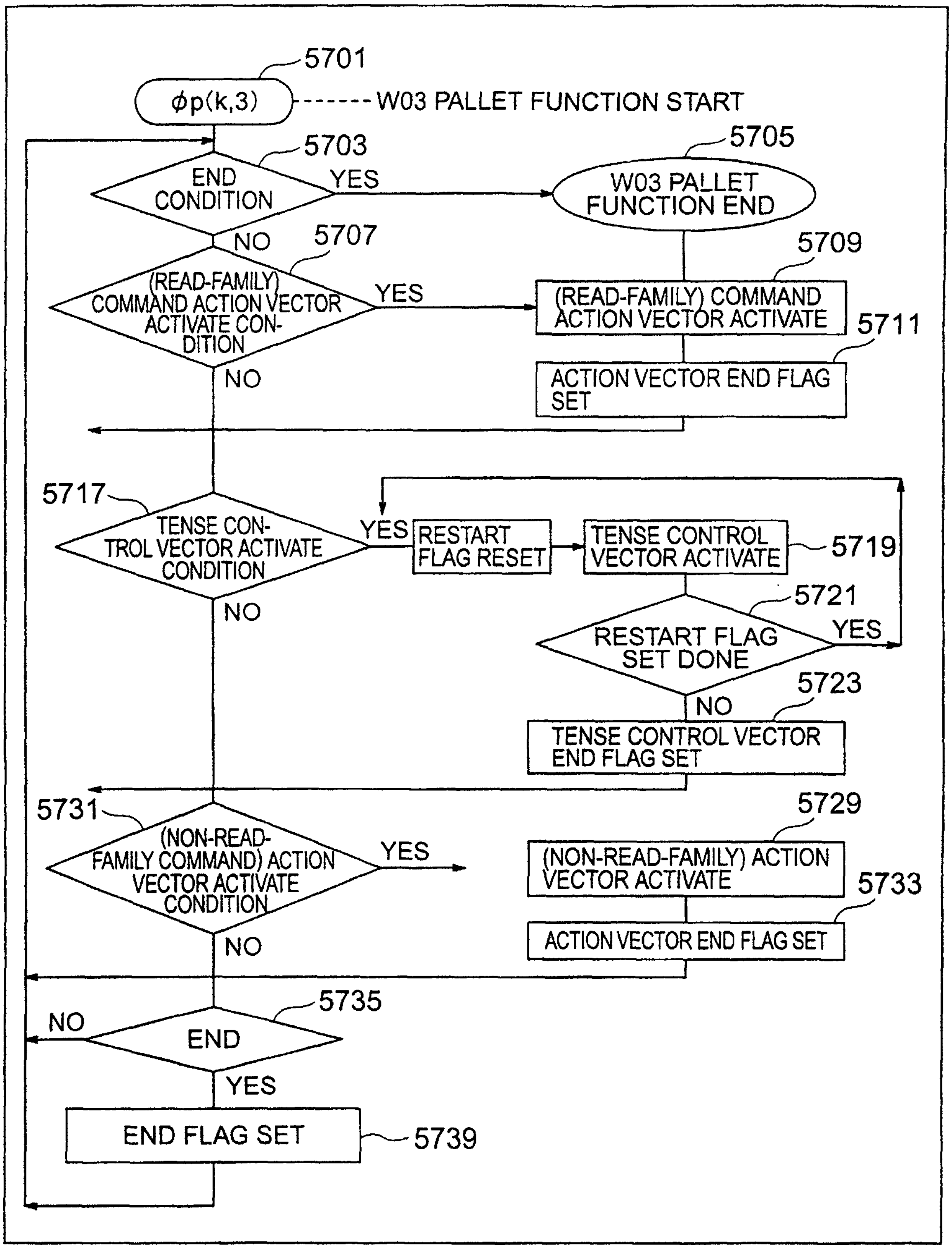
5701
φp(k,3)
W03 PALLET FUNCTION START
5703
END CONDITION
YES
NO
5705
W03 PALLET FUNCTION END
5707
(READ-FAMILY) COMMAND ACTION VECTOR ACTIVATE CON-DITION
YES
NO
5709
(READ-FAMILY) COMMAND ACTION VECTOR ACTIVATE
5711
ACTION VECTOR END FLAG SET
5717
TENSE CON-TROL VECTOR ACTIVATE CONDITION
YES
NO
RESTART FLAG RESET
TENSE CONTROL VECTOR ACTIVATE
5719
5721
RESTART FLAG SET DONE
YES
NO
5723
TENSE CONTROL VECTOR END FLAG SET
5731
(NON-READ-FAMILY COMMAND) ACTION VECTOR ACTIVATE CONDITION
YES
NO
5729
(NON-READ-FAMILY) ACTION VECTOR ACTIVATE
5733
ACTION VECTOR END FLAG SET
5735
END
NO
YES
END FLAG SET
5739

FIG. 58

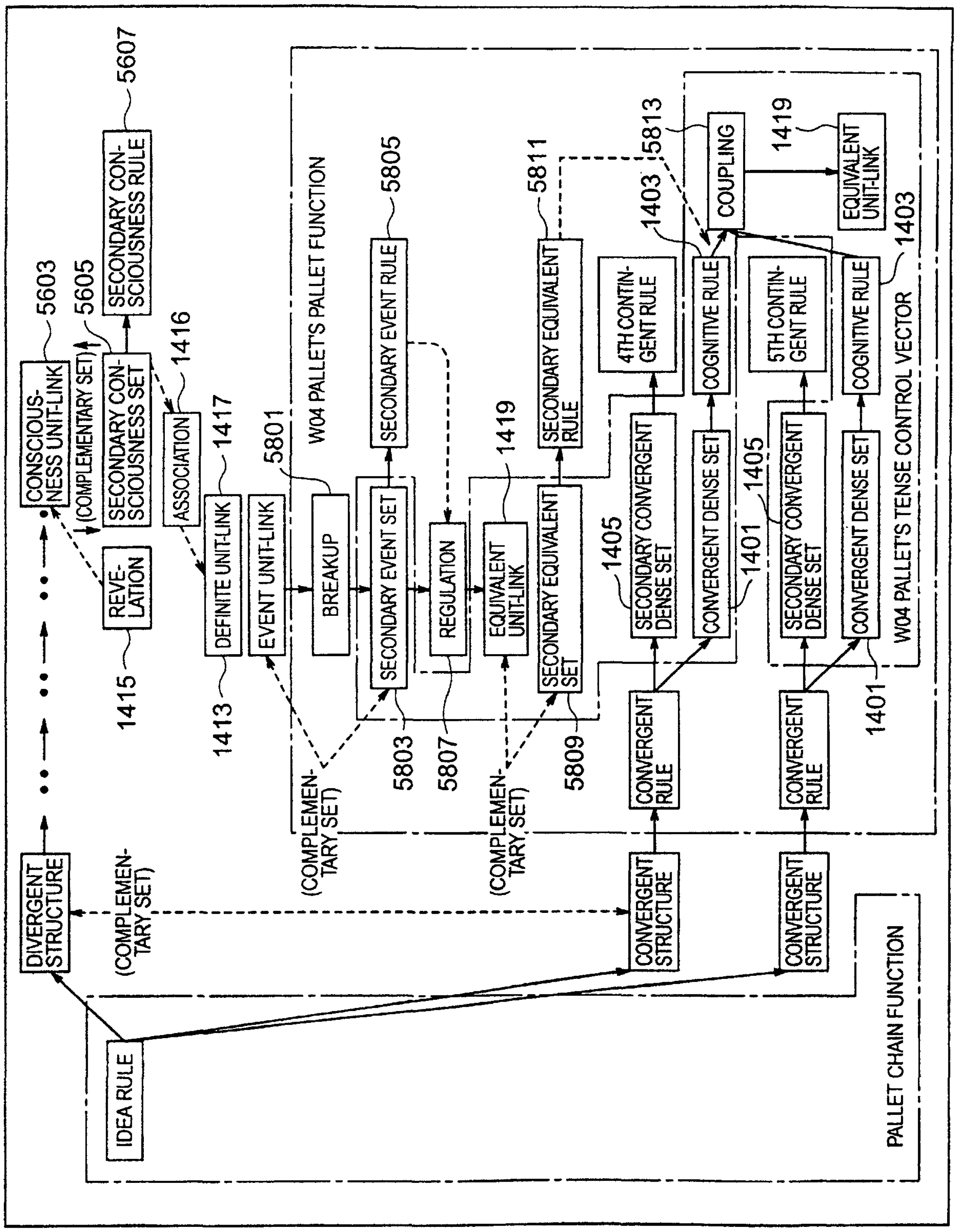
CONSCIOUS-NESS UNIT-LINK
5603
(COMPLEMENTARY SET)
5605
SECONDARY CON-SCIOUSNESS SET
SECONDARY CON-SCIOUSNESS RULE
5607
REVE-LATION
1415
ASSOCIATION
1416
DEFINITE UNIT-LINK
1417
1413
EVENT UNIT-LINK
5801
BREAKUP
W04 PALLET'S PALLET FUNCTION
SECONDARY EVENT SET
SECONDARY EVENT RULE
5805
5803
REGULATION
5807
EQUIVALENT UNIT-LINK
1419
SECONDARY EQUIVALENT SET
SECONDARY EQUIVALENT RULE
5811
5809
(COMPLEMEN-TARY SET)
(COMPLEMEN-TARY SET)
1405
SECONDARY CONVERGENT DENSE SET
4TH CONTIN-GENT RULE
CONVERGENT DENSE SET
1401
COGNITIVE RULE
1403
5813
COUPLING
1419
EQUIVALENT UNIT-LINK
1405
SECONDARY CONVERGENT DENSE SET
5TH CONTIN-GENT RULE
CONVERGENT DENSE SET
COGNITIVE RULE
1403
1401
W04 PALLET'S TENSE CONTROL VECTOR
CONVERGENT RULE
CONVERGENT RULE
DIVERGENT STRUCTURE
(COMPLEMEN-TARY SET)
CONVERGENT STRUCTURE
CONVERGENT STRUCTURE
IDEA RULE
PALLET CHAIN FUNCTION

FIG. 59

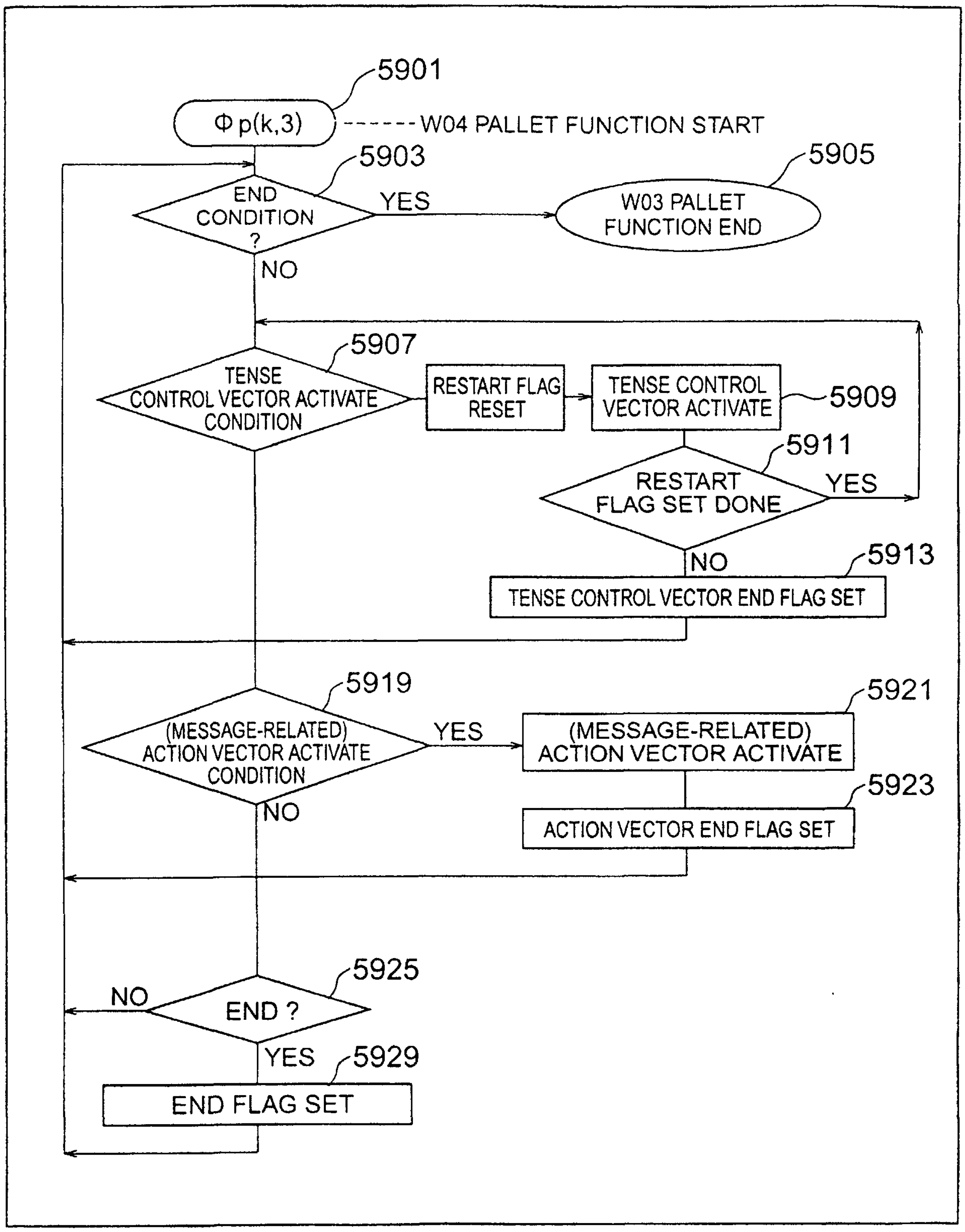
5901
Φ p(k,3)
W04 PALLET FUNCTION START
5903
END CONDITION ?
YES
5905
W03 PALLET FUNCTION END
NO
5907
TENSE CONTROL VECTOR ACTIVATE CONDITION
RESTART FLAG RESET
TENSE CONTROL VECTOR ACTIVATE
5909
5911
RESTART FLAG SET DONE
YES
NO
5913
TENSE CONTROL VECTOR END FLAG SET
5919
(MESSAGE-RELATED) ACTION VECTOR ACTIVATE CONDITION
YES
5921
(MESSAGE-RELATED) ACTION VECTOR ACTIVATE
NO
5923
ACTION VECTOR END FLAG SET
5925
NO
END ?
YES
5929
END FLAG SET

FIG. 60

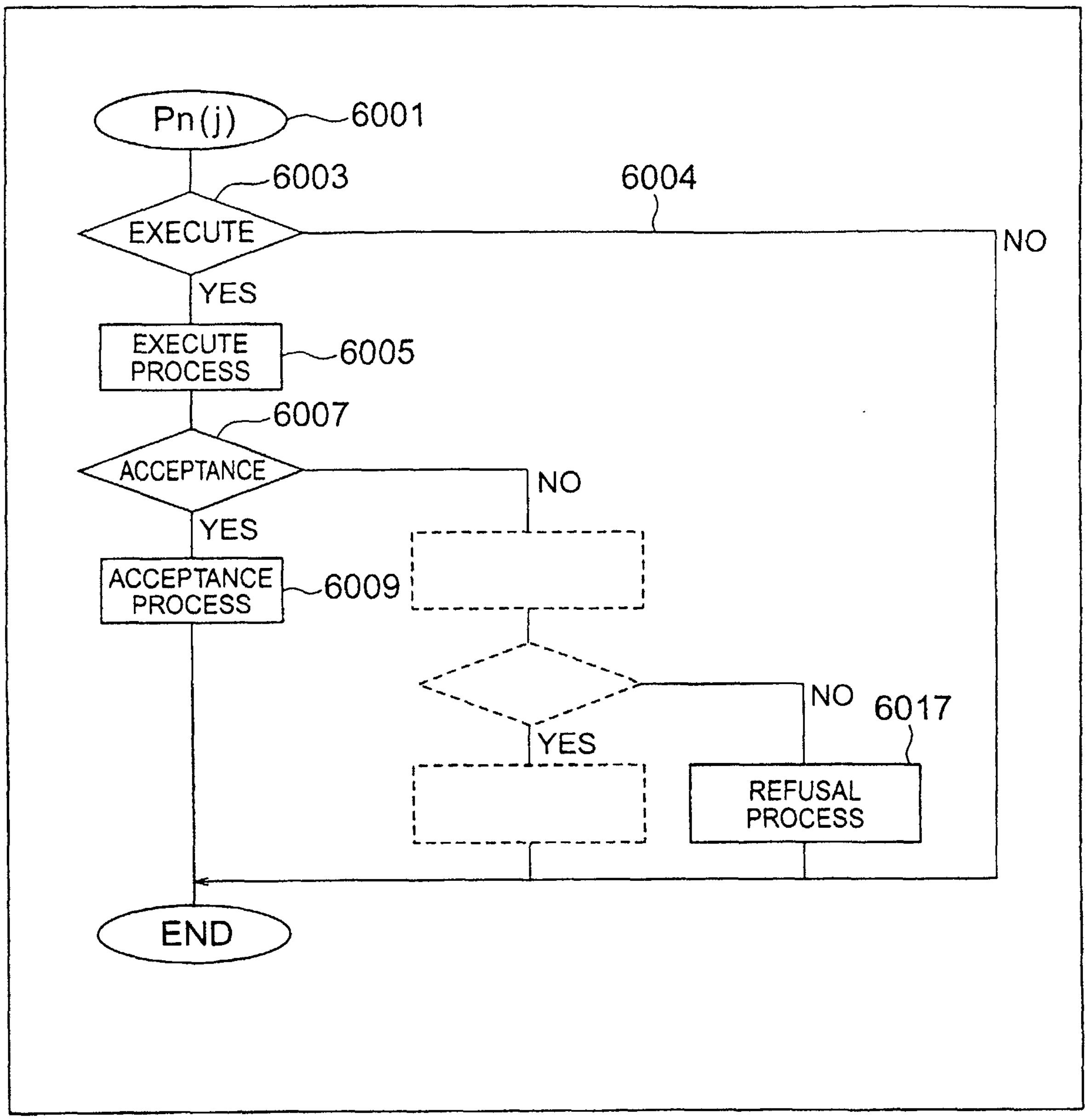
Pn(j)
6001
6003
6004
EXECUTE
NO
YES
EXECUTE PROCESS
6005
6007
ACCEPTANCE
NO
YES
ACCEPTANCE PROCESS
6009
NO
6017
YES
REFUSAL PROCESS
END

FIG. 61

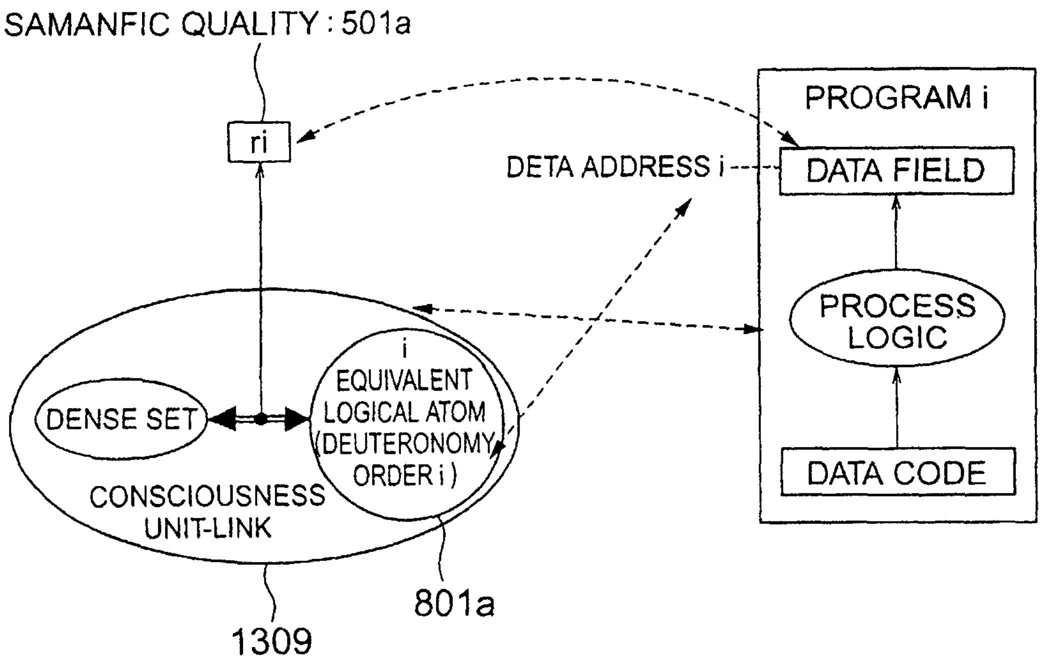
SAMANFIC QUALITY : 501a
ri
PROGRAM i
DETA ADDRESS i
DATA FIELD
PROCESS LOGIC
DATA CODE
DENSE SET
i
EQUIVALENT
LOGICAL ATOM
(DEUTERONOMY
ORDER i )
CONSCIOUSNESS
UNIT-LINK
801a
1309

FIG. 62

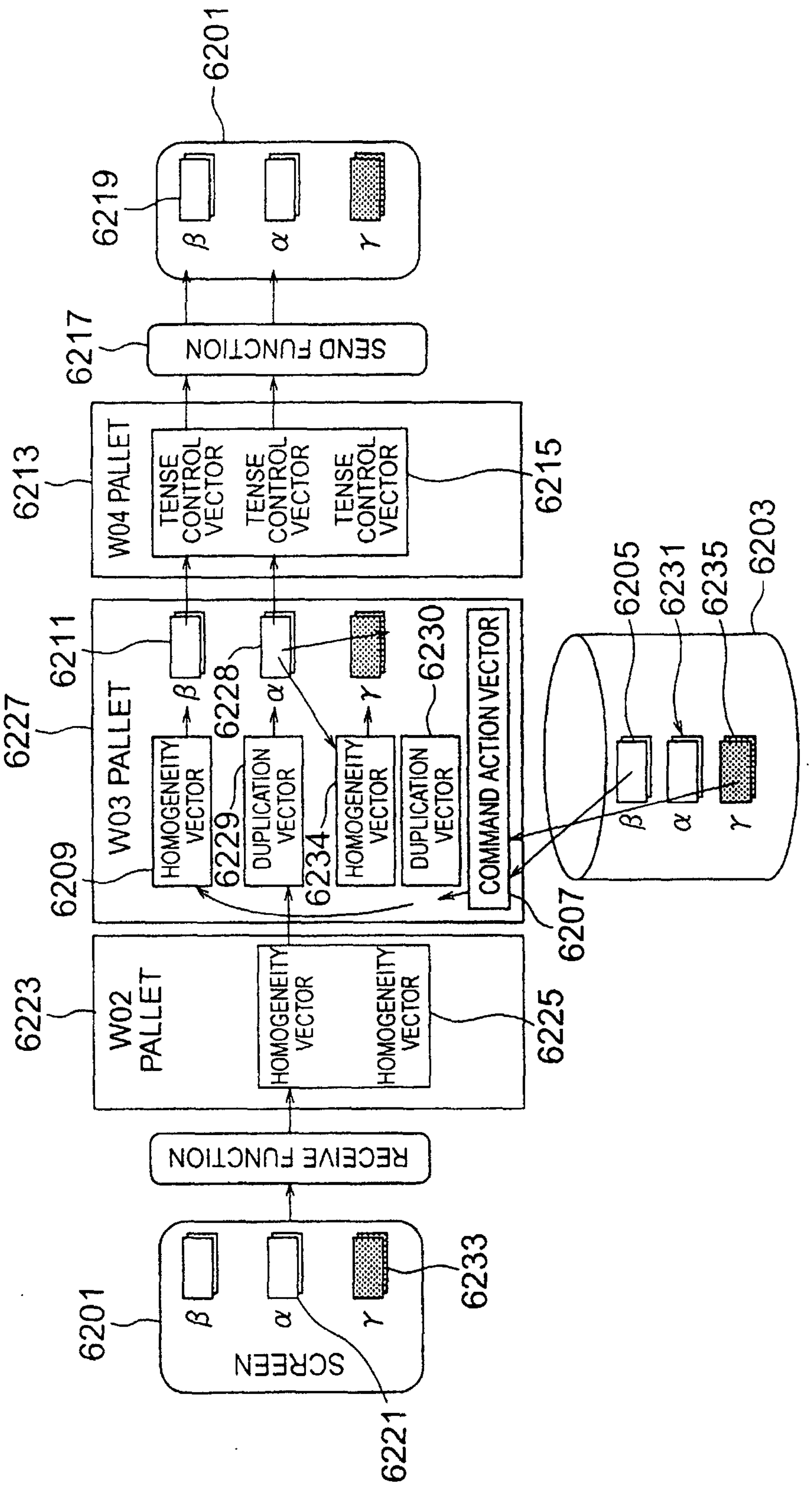

SCREEN
RECEIVE FUNCTION
W02 PALLET
HOMOGENEITY VECTOR
HOMOGENEITY VECTOR
W03 PALLET
HOMOGENEITY VECTOR
DUPLICATION VECTOR
HOMOGENEITY VECTOR
DUPLICATION VECTOR
COMMAND ACTION VECTOR
W04 PALLET
TENSE CONTROL VECTOR
TENSE CONTROL VECTOR
TENSE CONTROL VECTOR
SEND FUNCTION
β
α
γ
6201
6203
6205
6207
6209
6211
6213
6215
6217
6219
6221
6223
6225
6227
6228
6229
6230
6231
6233
6234
6235

FIG. 63

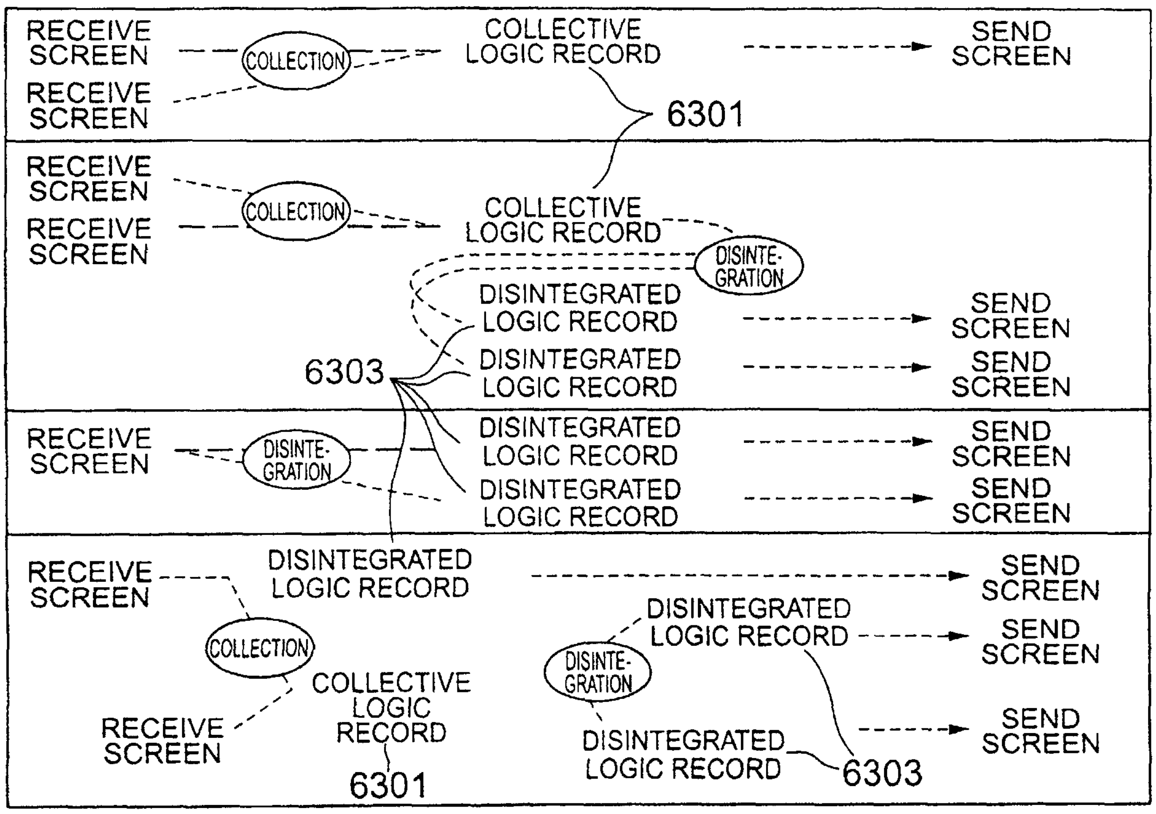
RECEIVE SCREEN
COLLECTION
COLLECTIVE LOGIC RECORD
SEND SCREEN
RECEIVE SCREEN
6301
RECEIVE SCREEN
COLLECTION
COLLECTIVE LOGIC RECORD
RECEIVE SCREEN
DISINTE-GRATION
DISINTEGRATED LOGIC RECORD
SEND SCREEN
6303
DISINTEGRATED LOGIC RECORD
SEND SCREEN
RECEIVE SCREEN
DISINTE-GRATION
DISINTEGRATED LOGIC RECORD
SEND SCREEN
DISINTEGRATED LOGIC RECORD
SEND SCREEN
RECEIVE SCREEN
DISINTEGRATED LOGIC RECORD
SEND SCREEN
DISINTEGRATED LOGIC RECORD
SEND SCREEN
COLLECTION
DISINTE-GRATION
COLLECTIVE LOGIC RECORD
SEND SCREEN
RECEIVE SCREEN
DISINTEGRATED LOGIC RECORD
6301
6303

FIG. 64

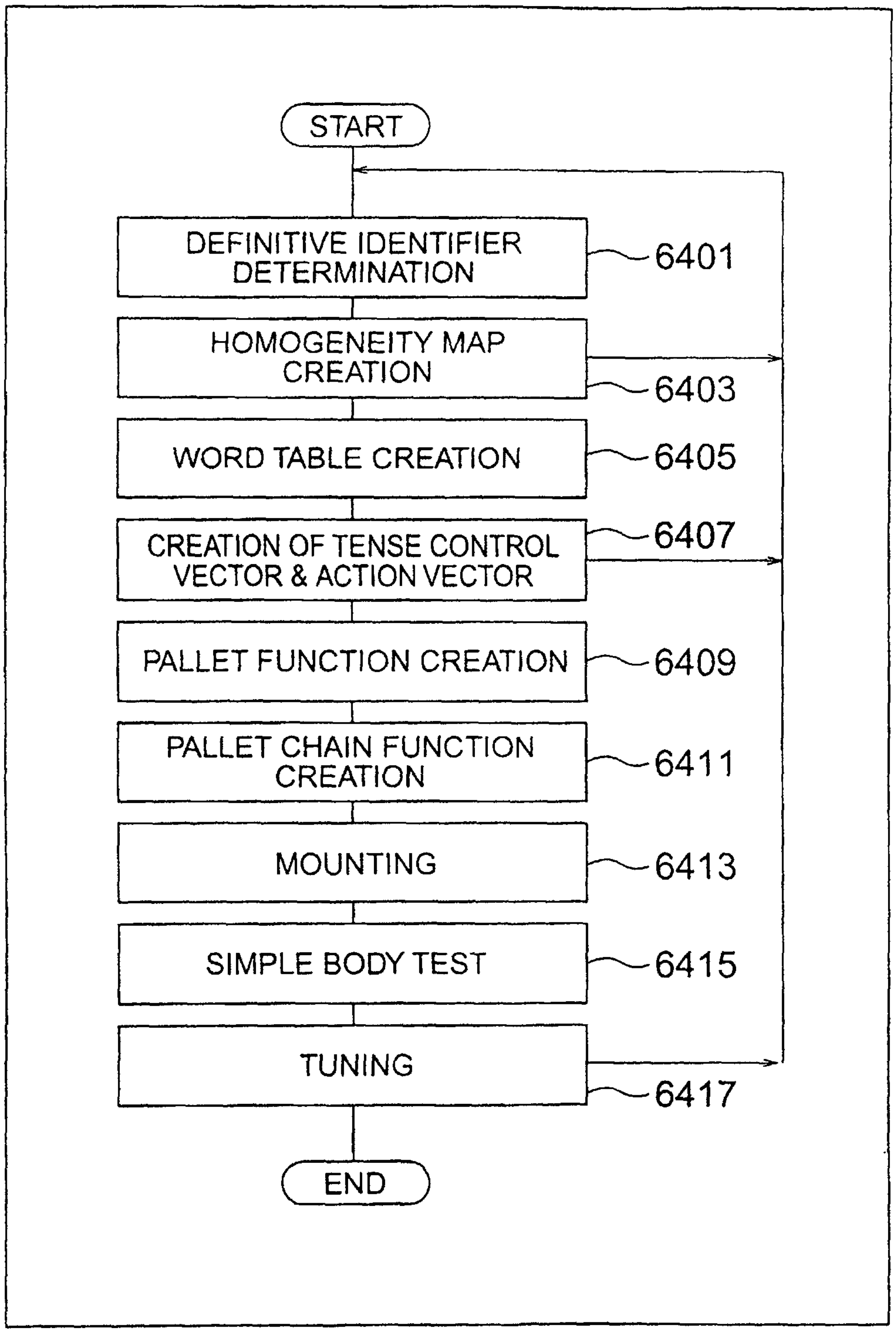
START
DEFINITIVE IDENTIFIER DETERMINATION
6401
HOMOGENEITY MAP CREATION
6403
WORD TABLE CREATION
6405
CREATION OF TENSE CONTROL VECTOR & ACTION VECTOR
6407
PALLET FUNCTION CREATION
6409
PALLET CHAIN FUNCTION CREATION
6411
MOUNTING
6413
SIMPLE BODY TEST
6415
TUNING
6417
END

FIG. 65

| ITEM # | DEFINITIVE NAME | DEFINITIVE IDETIFIER | MEDIUM |
|---|---|---|---|
| 1 | PRODUCT-WISE INVENTORY STATUS GRASPING SCREEN | GDSTCKSCRN | SCREEN |
| 2 | PRODUCT PROCUREMENT LEAD TIME STATUS GRASPING SCREEN | GDSTCKSCRN | SCREEN |
| ⋮ | | | |
| | | | |

FIG. 66

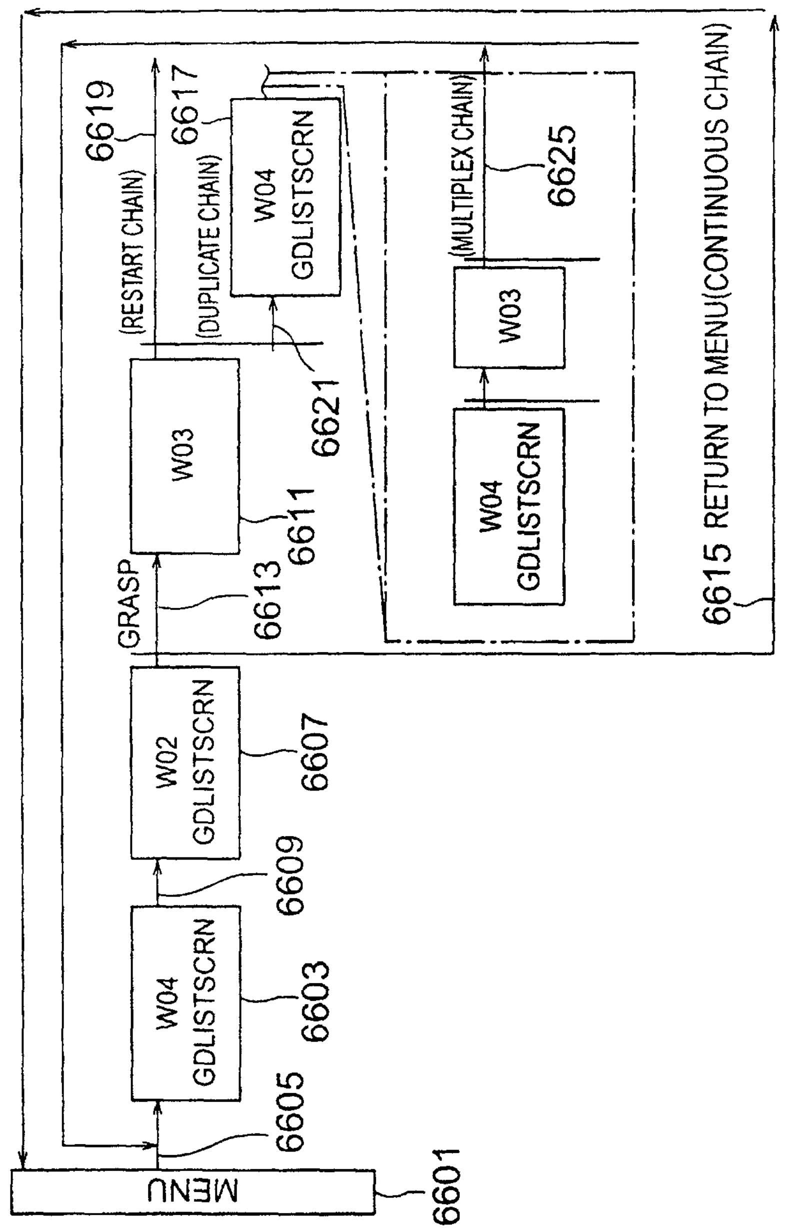
MENU
6601
6605
W04 GDLISTSCRN
6603
6609
W02 GDLISTSCRN
6607
GRASP
6613
W03
6611
6621
(RESTART CHAIN)
6619
(DUPLICATE CHAIN)
6617
W04 GDLISTSCRN
W04 GDLISTSCRN
W03
(MULTIPLEX CHAIN)
6625
6615 RETURN TO MENU(CONTINUOUS CHAIN)

# FIG. 67

| ITEM # | DEFINITIVE NAME | DEFINITIVE IDETIFIER | MEDIUM |
|---|---|---|---|
| 1 | PRODUCT-WISE INVENTORY STATUS GRASPING SCREEN | GDSTCKSCRN | SCREEN |
| 2 | PRODUCT PROCUREMENT LEAD TIME STATUS GRASPING SCREEN | GDLDTMSCRN | SCREEN |
| 3 | INVENTORY MANAGEMENT FILE | GDSTCKFILE | FILE |
| 4 | PRODUCT LOOKUP SCREEN | GDLISTSCRN | SCREEN |
| 5 | PRODUCT LOOKUP FILE | GDLISTFILE | FILE |
| | PRODUCT PURCHASE INFO.REGISTER<br>PRODUCT SHIPMENT INFO.REGISTER<br>PRODUCT MASTER-REGISTER | | SCREEN<br>SCREEN<br>SCREEN |
| | | | |

# FIG. 68

6801 6803 6805 6807

| ITEM # | CLASS | NAME | IDENTIFIER | ATTRIBUTE | No.OF DIGITS | INPUT/ OUTPUT |
|---|---|---|---|---|---|---|
| 1 | | PRODUCTS | | | | |
| 1-1 | BASE | PRODUCT CODE | GOOD_CD | LETTERS | 12 | INPUT |
| 1-2 | BASE | PRODUCT NAME | GOOD_NM | LETTERS | 20 | OUTPUT |
| 2 | | INVENTORY STATUS | | | | |
| 2-1 | BASE | PROPER INVENTORY QTY. | STCK_LV | NUMERALS | 02 | OUTPUT |
| 2-2 | BASE | CURRENT INVENTORY QTY. | INVNTRY | NUMERALS | 05 | OUTPUT |
| 3 | | COMMAND | | | | |
| 3-1 | BASE | GRASP | PF1_KEY | NUMERALS | 01 | INPUT |
| 3-2 | BASE | RETURN TO MENU | PF3_KEY | NUMERALS | 01 | INPUT |
| 4 | | MESSAGE | | | | |
| 4-1 | BASE | MESSAGE CODE | MSGE_CD | LETTERS | 04 | OUTPUT |
| 4-2 | BASE | MESSAGE TEXT | MSGE_TX | LETTERS | 70 | OUTPUT |
| 5 | | MESSAGE-RELATED ACTION VECTOR | | | | |
| 5-1 | ACTION | MESSAGE FILE OPEN | MSGFL_OP | | | |
| 5-2 | ACTION | FILE WORD MESSAGE CODE DETERMINE | FMSGCDDC | | | |
| 5-3 | ACTION | MESSAGE FILE READ | MSGFL_RD | | | |
| 5-4 | ACTION | MESSAGE TEXT EDIT | MSGTX_ED | | | |
| 5-4 | ACTION | ROUTE SETTING ACTION VECTOR | GOSTCKSCRNRT | | | |
| 6 | | STRUCTURAL ADJUST-MENT ACTION VECTOR | | | | |
| 6-1 | ACTION | FILE-RELATED REFUSAL FLAG RESET | PCLEAR1 | | | |
| 6-2 | ACTION | FILE-RELATED DATA FIELD MADE EMPTY | PCLEAR2 | | | |
| | | | | | | |

# FIG. 69

6801 6803 6805 6807

| ITEM # | CLASS | NAME | IDENTIFIER | ATTRIBUTE | No.OF DIGITS | INPUT/ OUTPUT |
|---|---|---|---|---|---|---|
| 1 | | PRODUCTS | | | | |
| 1-1 | BASE | PRODUCT CODE | GOOD_CD | LETTERS | 12 | INPUT |
| 1-2 | BASE | PRODUCT NAME | GOOD_NM | LETTERS | 20 | OUTPUT |
| 3 | | COMMAND | | | | |
| 3-1 | BASE | SELECT | PF1_KEY | NUMERALS | 01 | INPUT |
| 3-2 | BASE | RETURN | PF3_KEY | NUMERALS | 01 | INPUT |
| 4 | | MESSAGE | | | | |
| 4-1 | BASE | MESSAGE CODE | MSGE_CD | LETTERS | 04 | OUTPUT |
| 4-2 | BASE | MESSAGE TEXT | MSGE_TX | LETTERS | 70 | OUTPUT |
| 5 | | MESSAGE-RELATED ACTION VECTOR | | | | |
| 5-1 | ACTION | MESSAGE FILE OPEN | MSGFL_OP | | | |
| 5-2 | ACTION | FILE WORD MESSAGE CODE DETERMINE | FMSGCDDC | | | |
| 5-3 | ACTION | MESSAGE FILE READ | MSGFL_RD | | | |
| 5-4 | ACTION | MESSAGE TEXT EDIT | MSGTX_ED | | | |
| 5-4 | ACTION | ROUTE SETTING ACTION VECTOR | GDLDTMSCRNRT | | | |
| 6 | | STRUCTURAL ADJUST-MENT ACTION VECTOR | | | | |
| 6-1 | ACTION | FILE-RELATED REFUSAL FLAG RESET | PCLEAR1 | | | |
| 6-2 | ACTION | FILE-RELATED DATA FIELD MADE EMPTY | PCLEAR2 | | | |
| | | | | | | |

# FIG. 70

6801 6803 6805 6807

| ITEM # | CLASS | NAME | IDENTIFIER | ATTRIBUTE | No.OF DIGITS | INPUT/ OUTPUT |
|---|---|---|---|---|---|---|
| 1 | | PRODUCTS | | | | |
| 1-1 | BASE | PRODUCT CODE | GOOD_CD | LETTERS | 12 | INPUT |
| 1-2 | BASE | PRODUCT NAME | GOOD_NM | LETTERS | 20 | OUTPUT |
| 2 | | INVENTORY STATUS | | | | |
| 2-1 | BASE | PROPER INVENTORY QTY. | STCK_LV | NUMERALS | 02 | OUTPUT |
| 2-2 | BASE | CURRENT INVENTORY QTY. | INVNTRY | NUMERALS | 05 | OUTPUT |
| 3 | | COMMAND | | | | |
| 3-1 | BASE | GRASP | PF1_KEY | NUMERALS | 01 | INPUT |
| 3-2 | BASE | RETURN TO MENU | PF3_KEY | NUMERALS | 01 | INPUT |
| 4 | | MESSAGE | | | | |
| 4-1 | BASE | MESSAGE CODE | MSGE_CD | LETTERS | 04 | OUTPUT |
| 4-2 | BASE | MESSAGE TEXT | MSGE_TX | LETTERS | 70 | OUTPUT |
| | | | | | | |

# FIG. 71

6801 6803 6805 6807

| ITEM # | CLASS | NAME | IDENTIFIER | ATTRIBUTE | No.OF DIGITS | INPUT/ OUTPUT |
|---|---|---|---|---|---|---|
| 1 | | PRODUCTS | | | | |
| 1-1 | BASE | PRODUCT CODE | GOOD_CD | LETTERS | 12 | INPUT |
| 1-2 | BASE | PRODUCT NAME | GOOD_NM | LETTERS | 20 | OUTPUT |
| 3 | | COMMAND | | | | |
| 3-1 | BASE | SELECT | PF1_KEY | NUMERALS | 01 | INPUT |
| 3-2 | BASE | RETURN | PF3_KEY | NUMERALS | 01 | INPUT |
| 4 | | MESSAGE | | | | |
| 4-1 | BASE | MESSAGE CODE | MSGE_CD | LETTERS | 04 | OUTPUT |
| 4-2 | BASE | MESSAGE TEXT | MSGE_TX | LETTERS | 70 | OUTPUT |
| | | | | | | |

# FIG. 72

6801 6803 6805 6807

| ITEM # | CLASS | NAME | IDENTIFIER | ATTRIBUTE | No.OF DIGITS | INPUT/ OUTPUT |
|---|---|---|---|---|---|---|
| 1 | | PRODUCTS BELONGING TO GDSTCKSCRN SCREEN | | | | |
| 1-1 | BASE | PRODUCT CODE | GOOD_CD | LETTERS | 12 | INPUT |
| 1-2 | BASE | PRODUCT NAME | GOOD_NM | LETTERS | 20 | OUTPUT |
| 2 | | INVENTORY STATUS BELONGING TO GDSTCKSCRN SCREEN | | | | |
| 2-1 | BASE | PROPER INVENTORY QTY. | STCK_LV | NUMERALS | 02 | OUTPUT |
| 2-2 | BASE | CURRENT INVENTORY QTY. | INVNTRY | NUMERALS | 05 | OUTPUT |
| 3 | | COMMAND BELONGING TO GDSTCKSCRN SCREEN | | | | |
| 3-1 | BASE | GRASP | PF1_KEY | NUMERALS | 01 | INPUT |
| 3-2 | BASE | RETURN TO MENU | PF3_KEY | NUMERALS | 01 | INPUT |
| 4 | | MESSAGE BELONGING TO GDSTCKSCRN SCREEN | | | | |
| 4-1 | BASE | MESSAGE CODE | MSGE_CD | LETTERS | 04 | OUTPUT |
| 4-2 | BASE | MESSAGE TEXT | MSGE_TX | LETTERS | 70 | OUTPUT |
| 5 | | PRODUCTS BELONGING TO GDLISTSCRN SCREEN | | | | |
| 5-1 | BASE | PRODUCT CODE | GOOD_CD | LETTERS | 12 | OUTPUT |
| 5-2 | BASE | PRODUCT NAME | GOOD_NM | LETTERS | 20 | OUTPUT |
| 6 | | COMMAND BELONGING TO GDLISTSCRN SCREEN | | | | |
| 6-1 | BASE | SELECT | PF1_KEY | NUMERALS | 01 | INPUT |
| 6-2 | BASE | RETURN | PF3_KEY | NUMERALS | 01 | INPUT |
| 7 | | MESSAGE BELONGING TO GDLISTSCRN SCREEN | | | | |
| 7-1 | BASE | MESSAGE CODE | MSGE_CD | NUMERALS | 04 | OUTPUT |
| 7-2 | BASE | MESSAGE TEXT | MSGE_TX | NUMERALS | 70 | OUTPUT |
| | | | | | | |

# FIG. 73

6801 6803 6805 6807

| ITEM # | CLASS | NAME | IDENTIFIER | ATTRIBUTE | No.OF DIGITS | INPUT/ OUTPUT |
|---|---|---|---|---|---|---|
| 8 | | PRODUCTS BELONGING TO INVENTORY MANAGEMENT FILE | | | | |
| 8-1 | BASE | PRODUCT CODE | GOOD_CD | LETTERS | 12 | INPUT |
| 8-2 | BASE | PRODUCT NAME | GOOD_NM | LETTERS | 20 | INPUT |
| 9 | | PRODUCTS BELONGING TO MANAGEMENT LOOKUP FILE | | | | |
| 9-1 | BASE | PRODUCT CODE | GOOD_CD | LETTERS | 12 | INPUT |
| 9-2 | BASE | PRODUCT NAME | GOOD_NM | LETTERS | 20 | INPUT |
| 10 | | PRODUCTS BELONGING TO INVENTORY MANAGEMENT FILE | | | | |
| 10-1 | BASE | PROPER INVENTORY QTY. | STCK_LV | NUMERALS | 02 | INPUT |
| 10-2 | BASE | CURRENT INVENTORY QTY. | INVNTRY | NUMERALS | 05 | INPUT |
| 10-3 | BASE | DEFECT INVENTORY QTY. | FAILGDV | NUMERALS | 05 | INPUT |
| 11 | | COMMAND ACTION VECTOR | | | | |
| 11-1 | ACTION | FILE OPEN | GDSTCKFILE_OP | | | |
| 11-2 | ACTION | FILE READ | GDSTCKFILE_RD | | | |
| 11-3 | ACTION | FILE CLOSE | GDSTCKFILE_CL | | | |
| 11-4 | ACTION | FILE OPEN | GDLISTFILE_OP | | | |
| 11-5 | ACTION | FILE READ | GDLISTFILE_RD | | | |
| 11-6 | ACTION | FILE CLOSE | GDLISTFILE_CL | | | |
| 12 | | WORK REQUIREMENT ACTION VECTOR | | | | |
| 12-1 | ACTION | PROPER INVENTORY WARNING | INVNTRY_NG | | | |
| 13 | | ROUTE SETTING ACTION ALARM | | | | |
| 13-1 | ACTION | RESTART CHAIN 1 | RETCHAIN_1 | | | |
| 13-2 | ACTION | RESTART CHAIN 2 | RETCHAIN_2 | | | |
| 13-3 | ACTION | DUPLICATE CHAIN 1 | DBLCHAIN_1 | | | |
| 13-4 | ACTION | MULTIPLEX CHAIN 1 | MRCCHAIN_1 | | | |
| 14 | | STRUCTURAL ADJUSTMENT ACTION VECTOR | | | | |
| | | | | | | |
| 14-2 | ACTION | ACTION VECTOR EXECUTE DONE FLAG RESET | PCLRAR1 | | | |
| | | | | | | |

# FIG. 74

```
Private Sub L2_@ k @_@ i @()                    7401
  If W02.@ k @.@ i @()= "" Then                 7403
     Exit Sub
  End If
                                                7405
  J = 0
  If IsNumeric(W2.@ k @.@ i @ ) Then
     J = 1
  End If
  If J <> 1 Then                                7407
     Exit Sub
  End If
  W02.@ k @.@ i @_Non = False                   7409
End Sub
```

FIG. 75

```
Private Sub Y3_@k@_@i@()  ~7501
  If W02.@k@.@i@<>= "" Then  ~7503
    W03.@k@.@i@
     = W02.@k@.@i@  ~7505
  End If
End Sub
```

# FIG. 76

```
Private Sub L3_@%13@_@%15@()  ——7601
 If W03.@k@.@i@<>"" Then     ) 7603
   Exit Sub
End If
$ SELF                                       (7605c)
$ IF %46 eq 1                                ) 7605a
 W3_@k@_@i@ = W02.@k@.@i@
$ END IF
$ IF %46 ne 1                                ) 7605b
 W3_@k@_@i@ = W03.@k_f@.@i@
$ ENDIF
$ ENDSELF                                    (7605c)
 If W3_@k@_@i@ ="" Then      ) 7607
   Exit Sub
End If
$ KAIKI                      ) 7609
 If W3_@k@_@i@ ="" Then
   Exit Sub
End If
$ ENDKAIKI
 W03.@k@.@i@ = W3_@k@_@i@    ) 7611
 W03.@k@.@i@_Non = False
 W03_RECALL_FLG = True
End Sub
```

7605c

FIG. 77

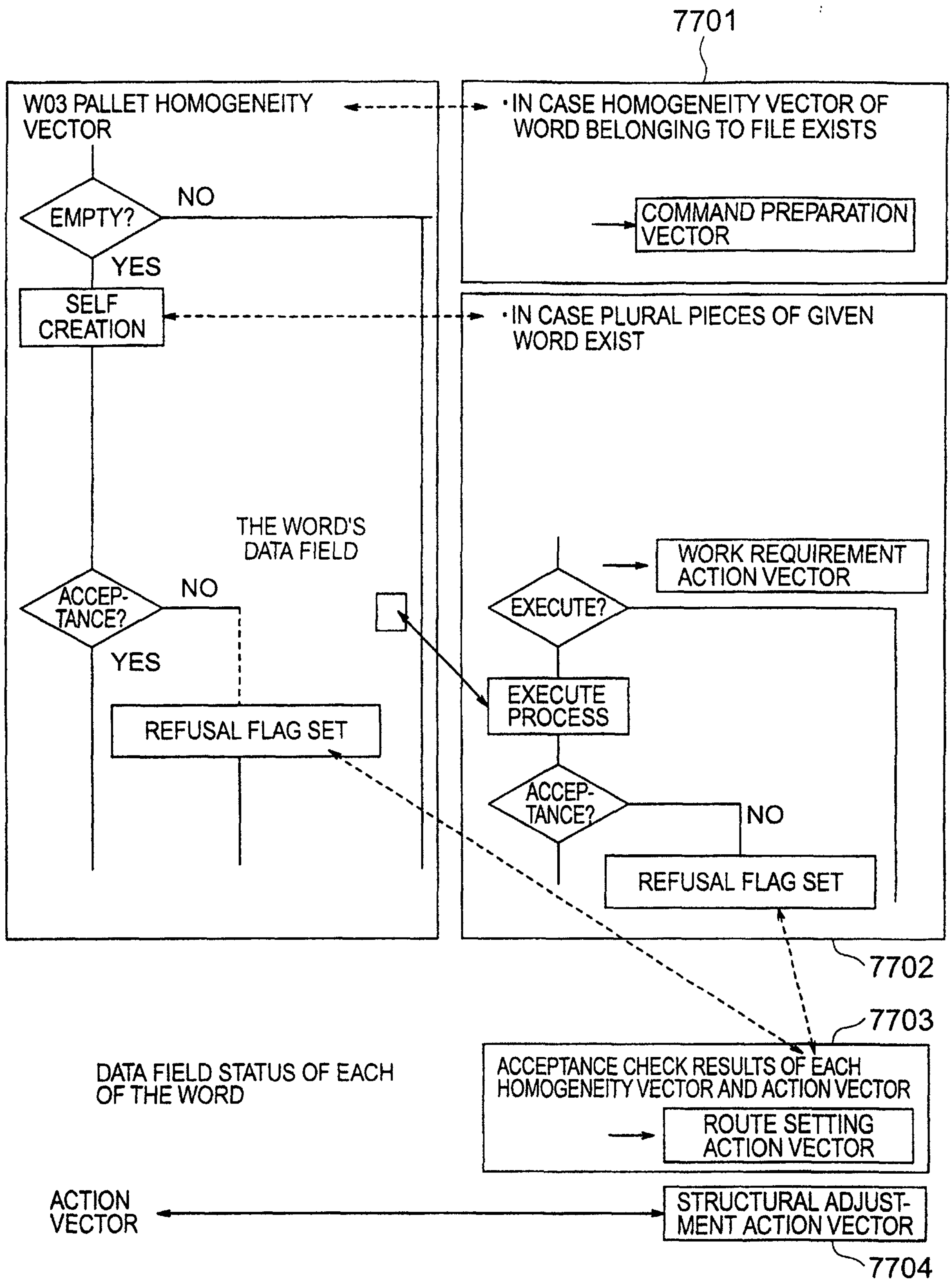
7701
W03 PALLET HOMOGENEITY VECTOR
EMPTY?
NO
YES
SELF CREATION
THE WORD'S DATA FIELD
ACCEPTANCE?
NO
YES
REFUSAL FLAG SET
• IN CASE HOMOGENEITY VECTOR OF WORD BELONGING TO FILE EXISTS
COMMAND PREPARATION VECTOR
• IN CASE PLURAL PIECES OF GIVEN WORD EXIST
WORK REQUIREMENT ACTION VECTOR
EXECUTE?
EXECUTE PROCESS
ACCEPTANCE?
NO
REFUSAL FLAG SET
7702
7703
DATA FIELD STATUS OF EACH OF THE WORD
ACCEPTANCE CHECK RESULTS OF EACH HOMOGENEITY VECTOR AND ACTION VECTOR
ROUTE SETTING ACTION VECTOR
ACTION VECTOR
STRUCTURAL ADJUSTMENT ACTION VECTOR
7704

FIG. 78

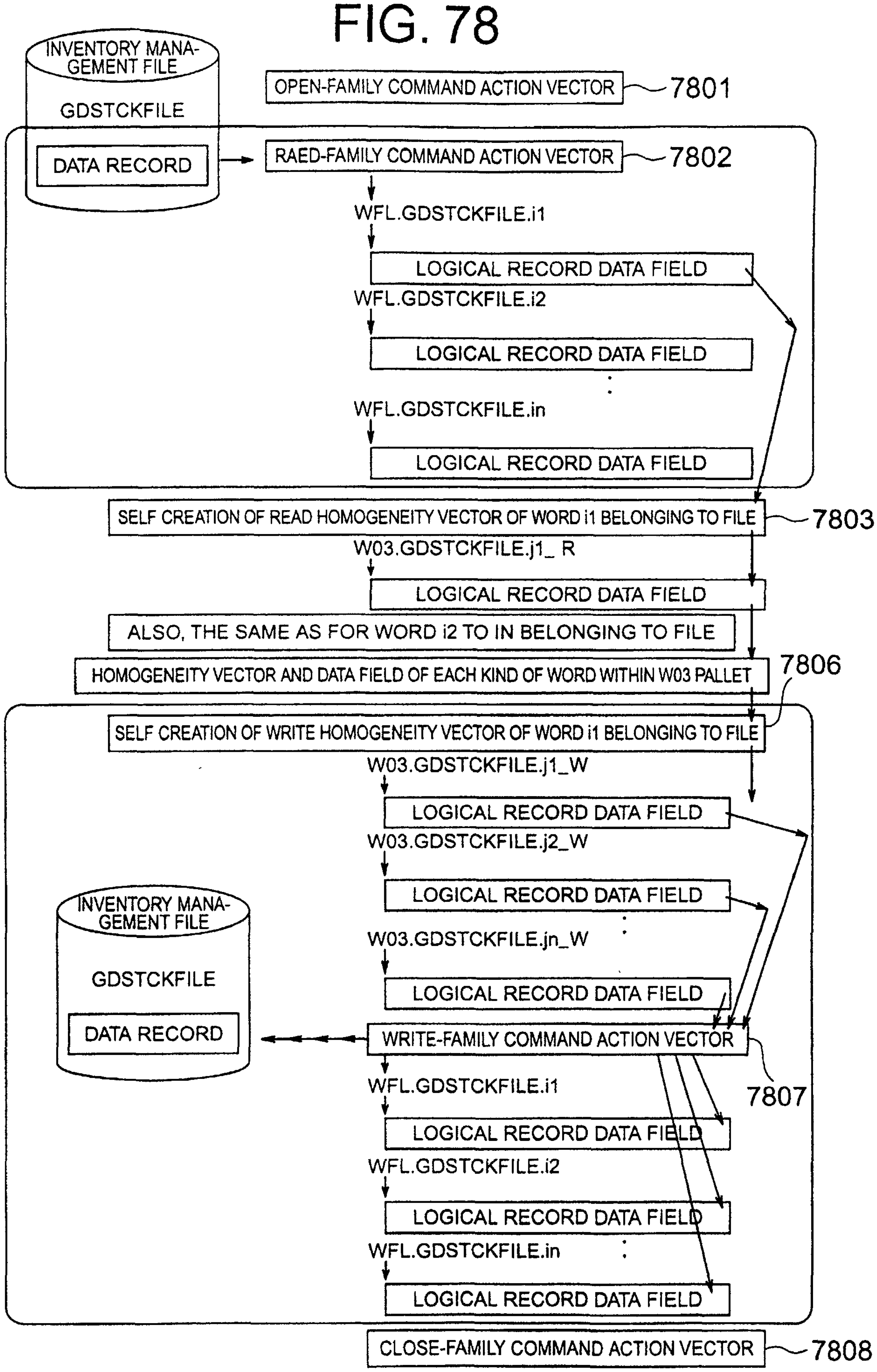
INVENTORY MANAGEMENT FILE
GDSTCKFILE
DATA RECORD
OPEN-FAMILY COMMAND ACTION VECTOR
7801
RAED-FAMILY COMMAND ACTION VECTOR
7802
WFL.GDSTCKFILE.i1
LOGICAL RECORD DATA FIELD
WFL.GDSTCKFILE.i2
LOGICAL RECORD DATA FIELD
WFL.GDSTCKFILE.in
LOGICAL RECORD DATA FIELD
SELF CREATION OF READ HOMOGENEITY VECTOR OF WORD i1 BELONGING TO FILE
7803
W03.GDSTCKFILE.j1_ R
LOGICAL RECORD DATA FIELD
ALSO, THE SAME AS FOR WORD i2 TO IN BELONGING TO FILE
HOMOGENEITY VECTOR AND DATA FIELD OF EACH KIND OF WORD WITHIN W03 PALLET
7806
SELF CREATION OF WRITE HOMOGENEITY VECTOR OF WORD i1 BELONGING TO FILE
W03.GDSTCKFILE.j1_W
LOGICAL RECORD DATA FIELD
W03.GDSTCKFILE.j2_W
LOGICAL RECORD DATA FIELD
W03.GDSTCKFILE.jn_W
LOGICAL RECORD DATA FIELD
INVENTORY MANAGEMENT FILE
GDSTCKFILE
DATA RECORD
WRITE-FAMILY COMMAND ACTION VECTOR
7807
WFL.GDSTCKFILE.i1
LOGICAL RECORD DATA FIELD
WFL.GDSTCKFILE.i2
LOGICAL RECORD DATA FIELD
WFL.GDSTCKFILE.in
LOGICAL RECORD DATA FIELD
CLOSE-FAMILY COMMAND ACTION VECTOR
7808

FIG.79

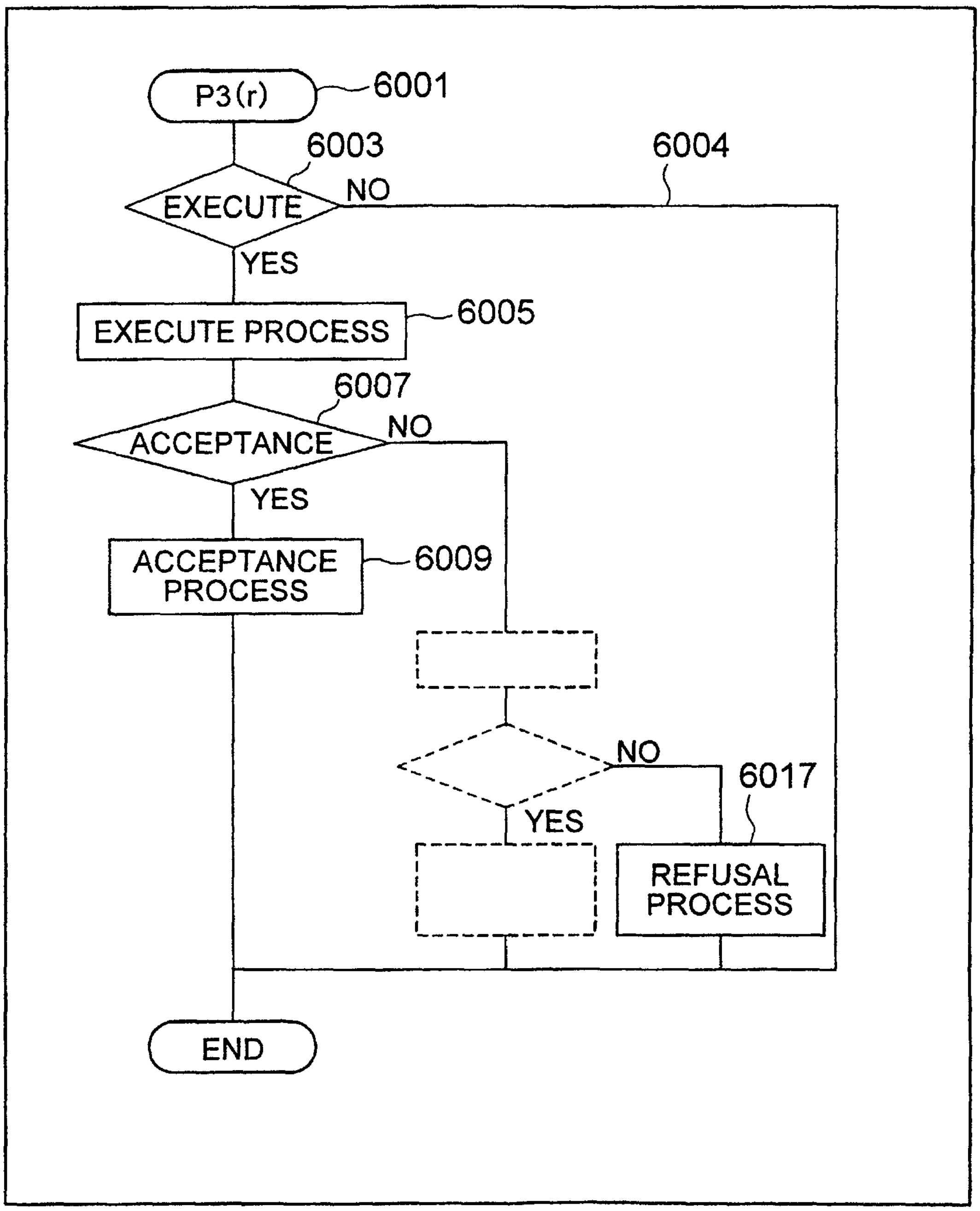
P3(r)
6001
6003
6004
EXECUTE
NO
YES
EXECUTE PROCESS
6005
6007
ACCEPTANCE
NO
YES
ACCEPTANCE PROCESS
6009
NO
6017
YES
REFUSAL PROCESS
END

# FIG.80

8001

```
Private Sub P3 GDSTCKFILE RD()
```

EXECUTE JUDGMENT (8003)

```
If W03 GDSTCKFILE_RD_FIG<>""And W02.GDSTCKSCRN.GOOD_CD=""Then
  Exjt Sub
End If
```

EXECUTE (8005)

```
setSQL_GDSTCKFILE="select*from GDSTCKFILE.
wbrere GOOD CD='"&W02. GDSTCKSCRN.GOOD. CD&"'"


Set rs_GDSTCKFILE=db_GDSTCKFILE.OpenRecordset(setSQL_GDSTCKFILE.
    dbOpenDynamjc)
```

ACCEPTANCE JUDGMENT (8007)

```
On Error GoTo OpenError
```

ACCEPTANCE PROCESS (8009)

```
WFL_GDSTCKFILE_GOOD_CD =rs_GDSTCKFILE.GOOD_CD.Value
WFL_GDSTCKFILE_GOOD_NM =rs_GDSTCKFILE.GOOD_NM.Value
WFL_GDSTCKFILE_STCK_LV  =rs_GDSTCKFILE.STCK_LV.Value
WFL_GDSTCKFILE_INVNTRY  =rs_GDSTCKFILE.INVNTRY.Valuer
```

EXECUTE DONE FLAG SET

```
W03_GDSTCKFILE_RD_FLG="1"
```

```
Exit Sub
```

REFUSAL PROCESS (8011)

```
ReadError : W03_GDSTCKFILE_RD_Non=True
            W03_GDSTCKFILE_RD_FLG=""

End Sub
```

FIG.81

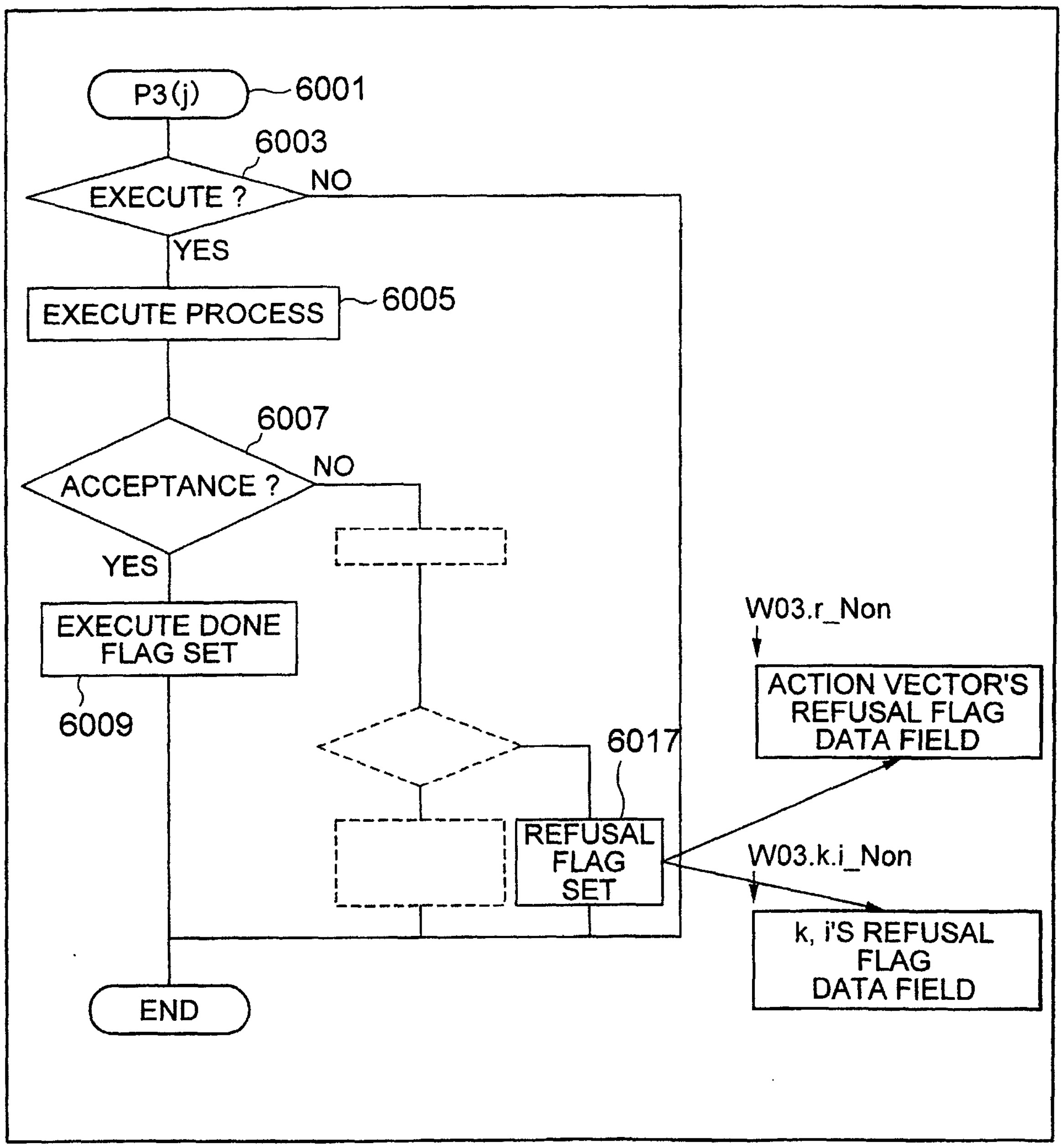
P3(j)
6001
6003
EXECUTE ?
NO
YES
EXECUTE PROCESS
6005
6007
ACCEPTANCE ?
NO
YES
EXECUTE DONE FLAG SET
6009
6017
REFUSAL FLAG SET
W03.r_Non
ACTION VECTOR'S REFUSAL FLAG DATA FIELD
W03.k.i_Non
k, i'S REFUSAL FLAG DATA FIELD
END

# FIG.82

```
Private Sub P3_ME_INVNTRY_NG()

EXECUTE JUDGMENT
If W03_ME_INVNTRY_NG_FIG<>""Then Exjt Sud

End If
EXECUTE
If Val(W03.GDSTCKSCRN.INVNTRY)<20 Then
W03_ME_INVNTRY_NG_FLG="1"

   Exjt Sub
End If
ACCEPTANCE JUDGMENT
If W03_ME_INVNTRY_NG_FLG="1" Then
W03_ME_INVNTRY_NG_FLG="1"
   Exjt Sub
End If

REFUSAL PROCESS
W03_ME¯INVNTRY¯NG¯Non=True
W03.GDSTCKSCRN.INVNTRY¯Non=True
W03_ME¯INVNTRY¯NG¯FLG=""
End Sub
```

8201
8203
8205
8207
8209
8217

FIG.83

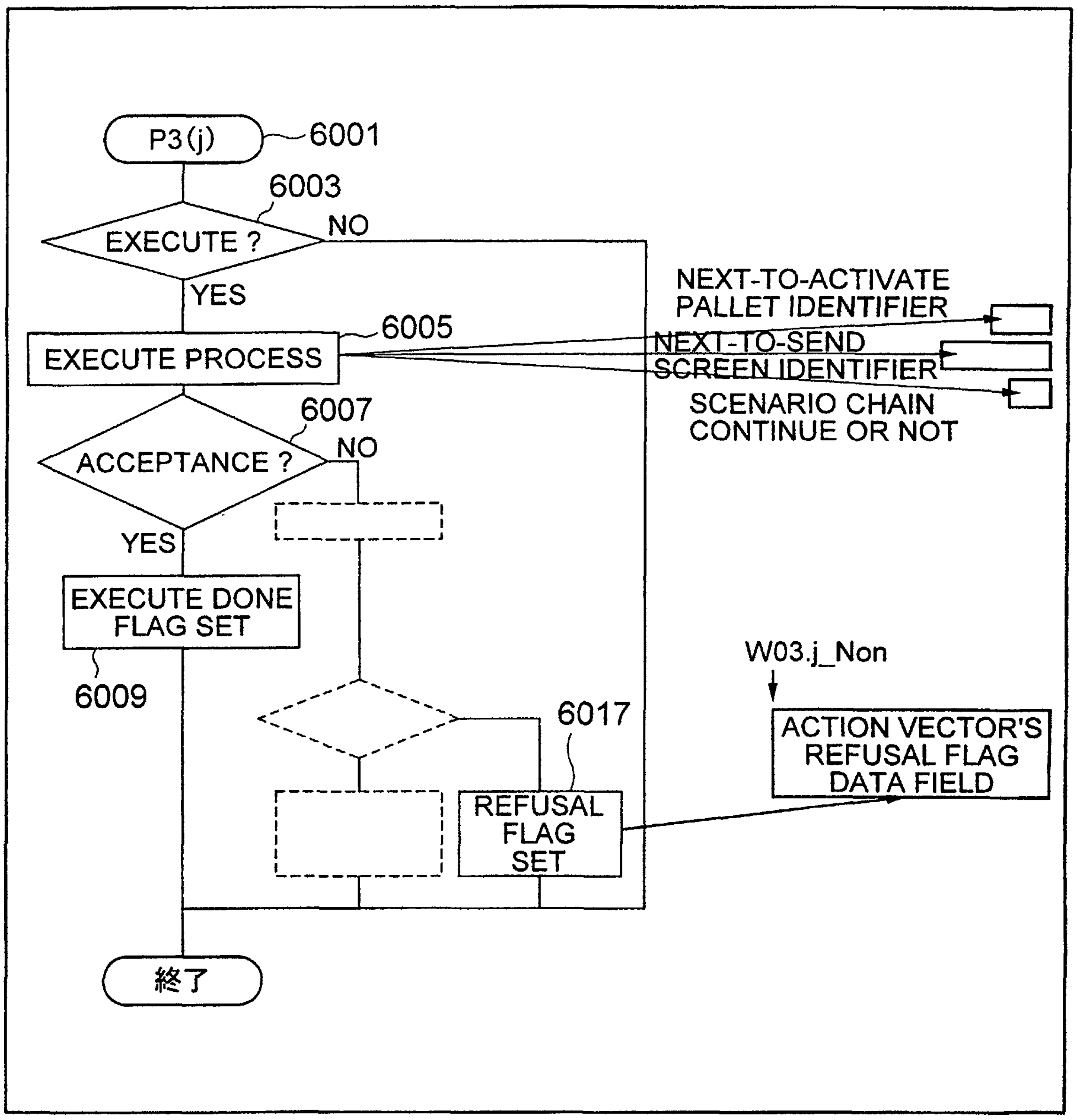
P3(j)
6001
6003
EXECUTE ?
NO
YES
6005
EXECUTE PROCESS
NEXT-TO-ACTIVATE
PALLET IDENTIFIER
NEXT-TO-SEND
SCREEN IDENTIFIER
SCENARIO CHAIN
CONTINUE OR NOT
6007
ACCEPTANCE ?
NO
YES
EXECUTE DONE
FLAG SET
6009
6017
W03.j_Non
ACTION VECTOR'S
REFUSAL FLAG
DATA FIELD
REFUSAL
FLAG
SET
終了

FIG.84

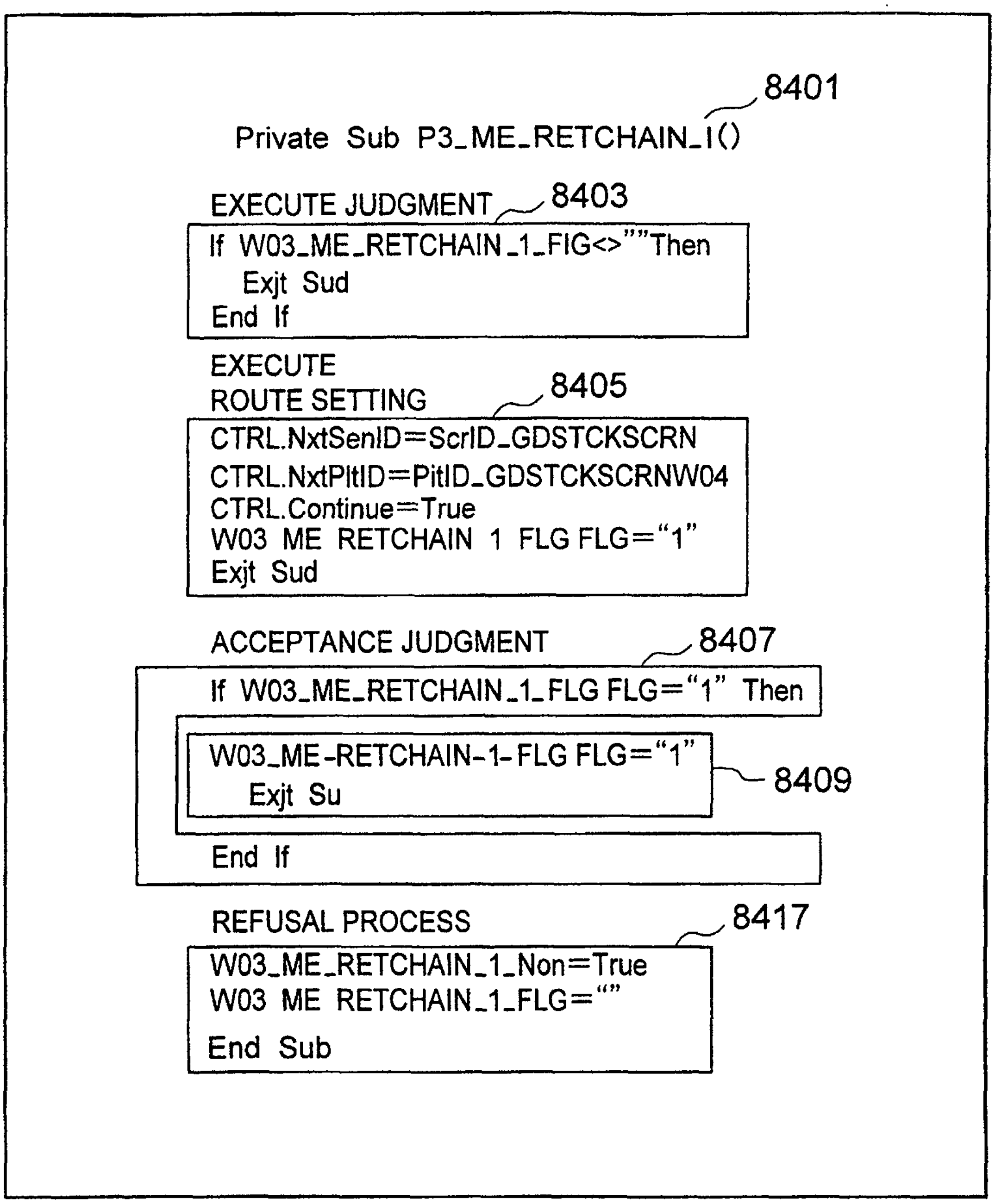
8401
Private Sub P3_ME_RETCHAIN_1()
EXECUTE JUDGMENT
8403
If W03_ME_RETCHAIN_1_FIG<>""Then
Exjt Sud
End If
EXECUTE
ROUTE SETTING
8405
CTRL.NxtSenID=ScrID_GDSTCKSCRN
CTRL.NxtPltID=PitID_GDSTCKSCRNW04
CTRL.Continue=True
W03 ME RETCHAIN 1 FLG FLG="1"
Exjt Sud
ACCEPTANCE JUDGMENT
8407
If W03_ME_RETCHAIN_1_FLG FLG="1" Then
W03_ME-RETCHAIN-1-FLG FLG="1"
Exjt Su
8409
End If
REFUSAL PROCESS
8417
W03_ME_RETCHAIN_1_Non=True
W03 ME RETCHAIN_1_FLG=""
End Sub

# FIG.85

```
Private Sub Y4_@k@_@i@()                        ~ 8501
  If W02.@k@.@i@<>="" Then
     W04.@k@.@i@                                ~ 8503
      = W02.@k@.@i@
Else
  If W03.@k@.@i@<> "" Then
     W04.@k@.@i@                                ~ 8505
      = W03.@k@.@i@
   End If
  End If
 End Sub
```

# FIG.86

```
Private Sub L4_@ k @_@ i @()  ~ 8601
 If W04. @ k @. @ i @<>W04. @ k @ i @ Then  } 8603
    Exit Sub
 End If
$SELF
 W04. @ k @. @ i @ = W03. @ k @. @ i @  } 8605
$ENDSELF
 If W02. @ k @. @ i @_Non = True Then
   W04. @ k @. MSG = " @ k @. @ i @ W02error "  } 8607
   W02. @ k @. @ i @_Non = False
 Else
 If W03. @ k @. @ i @_Non = True Then
   W04. @ k @.@ i @. MSG = " @ k @. @ i @ W03error "  } 8609
   W03. @ k @. @ i @_Non = False
  End If
 End If
```

FIG.87

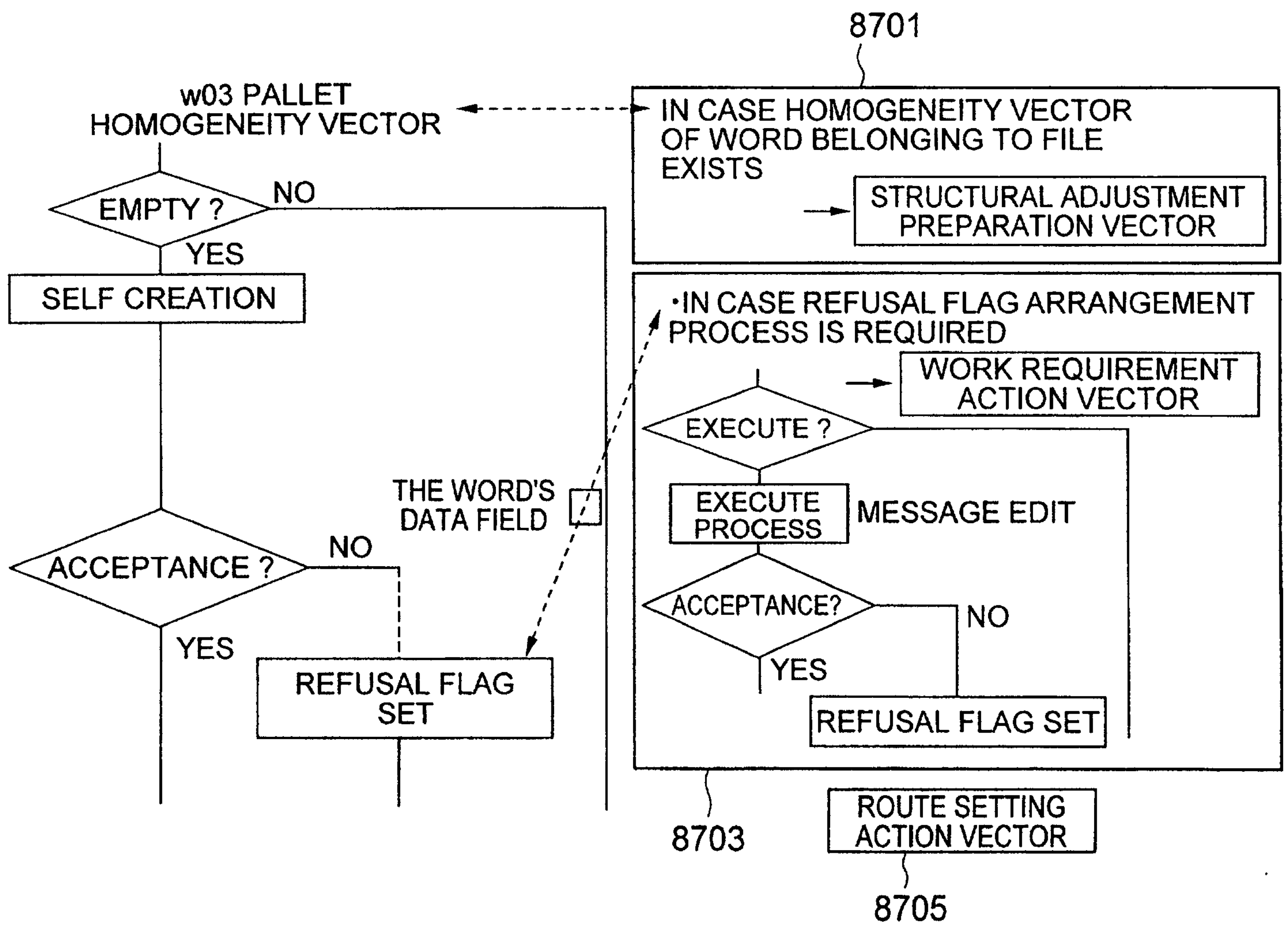
w03 PALLET HOMOGENEITY VECTOR
EMPTY ?
NO
YES
SELF CREATION
ACCEPTANCE ?
NO
YES
REFUSAL FLAG SET
THE WORD'S DATA FIELD
8701
IN CASE HOMOGENEITY VECTOR OF WORD BELONGING TO FILE EXISTS
STRUCTURAL ADJUSTMENT PREPARATION VECTOR
·IN CASE REFUSAL FLAG ARRANGEMENT PROCESS IS REQUIRED
WORK REQUIREMENT ACTION VECTOR
EXECUTE ?
EXECUTE PROCESS
MESSAGE EDIT
ACCEPTANCE?
NO
YES
REFUSAL FLAG SET
8703
ROUTE SETTING ACTION VECTOR
8705

# FIG.88

```
                                              8801
Private Sub P4_ME_PCLEAR1()

REM EXECUTE JUDGMENT                               8802
If W04_ME_ PCLEAR1_FIG=""Then

REM EXECUTE
===ACTION VECTOR REFUSAL FLAG<Non>
===READ-DB WORD'S REFUSAL FLAG <Non>
W03.GDSTCKFILE_GOOD_CD_Non=False
W03.GDSTCKFILE_GOOD_NM_Non=False          8803
W03.GDSTCKFILE_STCK_LV_Non=False
W03.GDSTCKFILE_STCK_LV_Non=False

===WRITE-DB WORD'S REFUSAL FLAG<Non>
===UPDATE-DB WORD'S REFUSAL FLAG<Non>

End If
End Sub
```

FIG.89

```
Private Sub P4_ME_PCLEAR2()
REM EXECUTE JUDGMENT
If W04_ME_ PCLEAR2_FIG=""Then
REM EXECUTE

===DB WORD AREA CLEAR
W03.GDSTCKFILE_GOOD_CD=""
W03.GDSTCKFILE_GOOD_NM=""
W03.GDSTCKFILE_STCK_LV=""
W03.GDSTCKFILE_STCK_LV=""
End If
End Sub
```

8901
8902
8903

# FIG.90

```
Private Sub P4_ME_GDSTCKSCRNRT()          8901
REM EXECUTE JUDGMENT
If W04_ME_ GDSTCKSCRNRT_FIG<>""Then       8902
  Exjt Sud
End If
REM EXECUTE
REM ROUTE SETTING
CTRL.NxtScnID=ScrID_GDSTCKSCRN            9003
CTRL.NxtP1tID=P1tID_GDSTCKSCRNW02         9004
CTRL.Continue=True                        9005
W04_ME_ GDSTCKSCRNRT_FIG="1"

REM ACCEPTANCE JUDGMENT
If W04_ME_ GDSTCKSCRNRT_FIG="1"Then
  Exjt Sud
```

FIG. 91

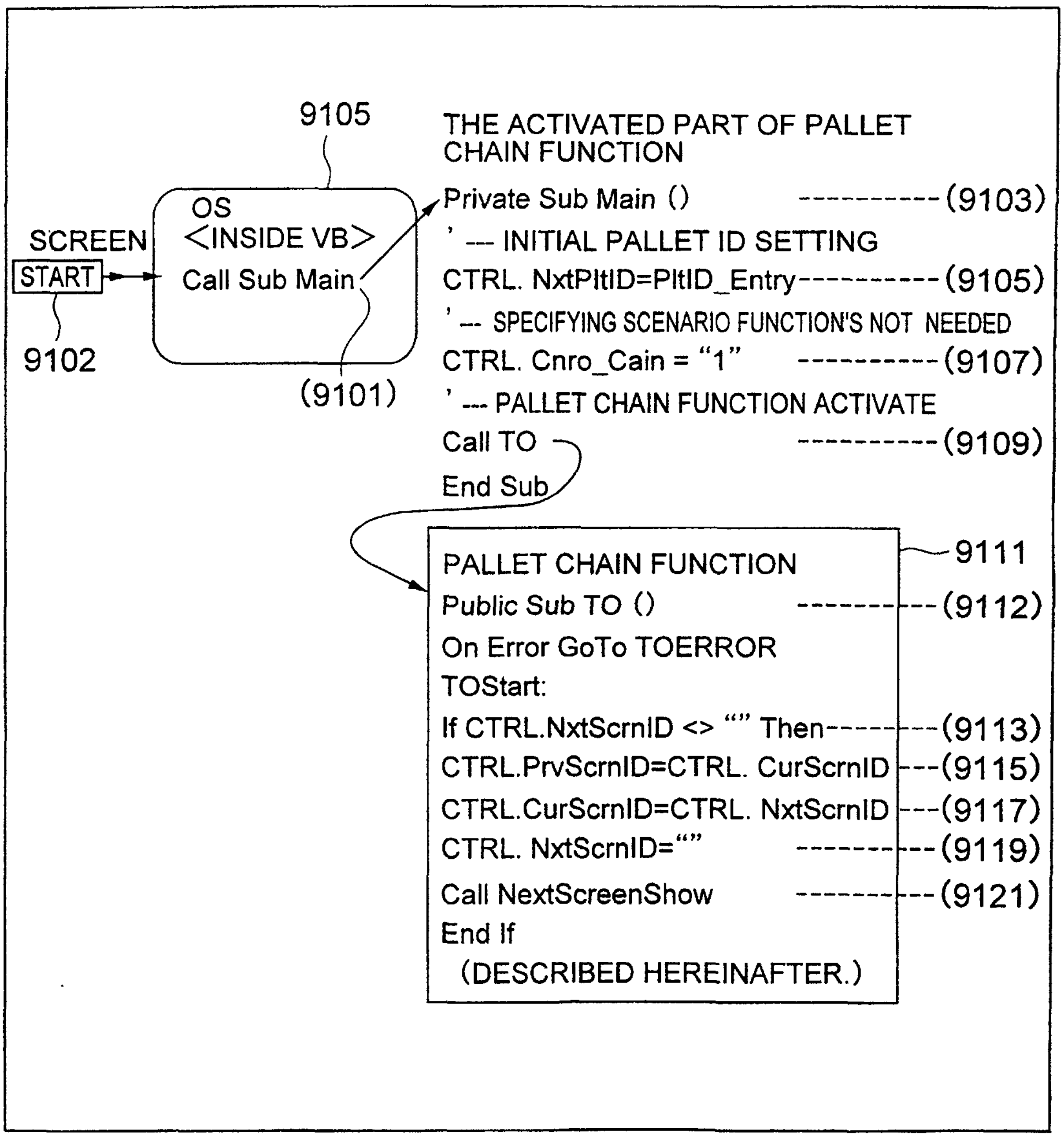
9105
THE ACTIVATED PART OF PALLET CHAIN FUNCTION
SCREEN
START
9102
OS
<INSIDE VB>
Call Sub Main
(9101)
Private Sub Main () ----------(9103)
' --- INITIAL PALLET ID SETTING
CTRL. NxtPltID=PltID_Entry----------(9105)
' --- SPECIFYING SCENARIO FUNCTION'S NOT NEEDED
CTRL. Cnro_Cain = "1" ----------(9107)
' --- PALLET CHAIN FUNCTION ACTIVATE
Call TO ----------(9109)
End Sub
9111
PALLET CHAIN FUNCTION
Public Sub TO () ----------(9112)
On Error GoTo TOERROR
TOStart:
If CTRL.NxtScrnID <> "" Then----------(9113)
CTRL.PrvScrnID=CTRL. CurScrnID ---(9115)
CTRL.CurScrnID=CTRL. NxtScrnID ---(9117)
CTRL. NxtScrnID="" ----------(9119)
Call NextScreenShow ----------(9121)
End If
(DESCRIBED HEREINAFTER.)

# FIG. 92

```
 --- NEXT PALLET ACTIVATE PREPARATION
   CTRL.PrvPltnID=CTRL. CurPltnID  --------- (9201)
   CTRL.CurPltnID=CTRL. NxtPltnID  --------- (9203)
   CTRL.NxtPltnID=""               ------------------- (9205)
 --- PALLET ACTIVATE
   Call PALLETCall                 ------------------- (9207)
   GoTo TOStart                    ------------------- (9209)
End Sub
```

```
'**************************************************
'PALLET ACTIVATE
Public Sub PALLETCall ()
  Select Case CTRL. CurPltID
    Case PltID_GDSTCKSCRNW02
        Call GDSTCKSCRNW02
    Case PltID_GDSTCKSCRNW04
        Call GDSTCKSCRNW04
    Case PltID_GDSTCKSCRNW02
        Call GDSTCKSCRNW02
    Case PltID_GDSTCKSCRNW04
        Call GDSTCKSCRNW04
    Case PltID_GDSTCKSCRNW03
    Call GDSTCKSCRNW03
  End Select
End Sub
```

FIG. 93

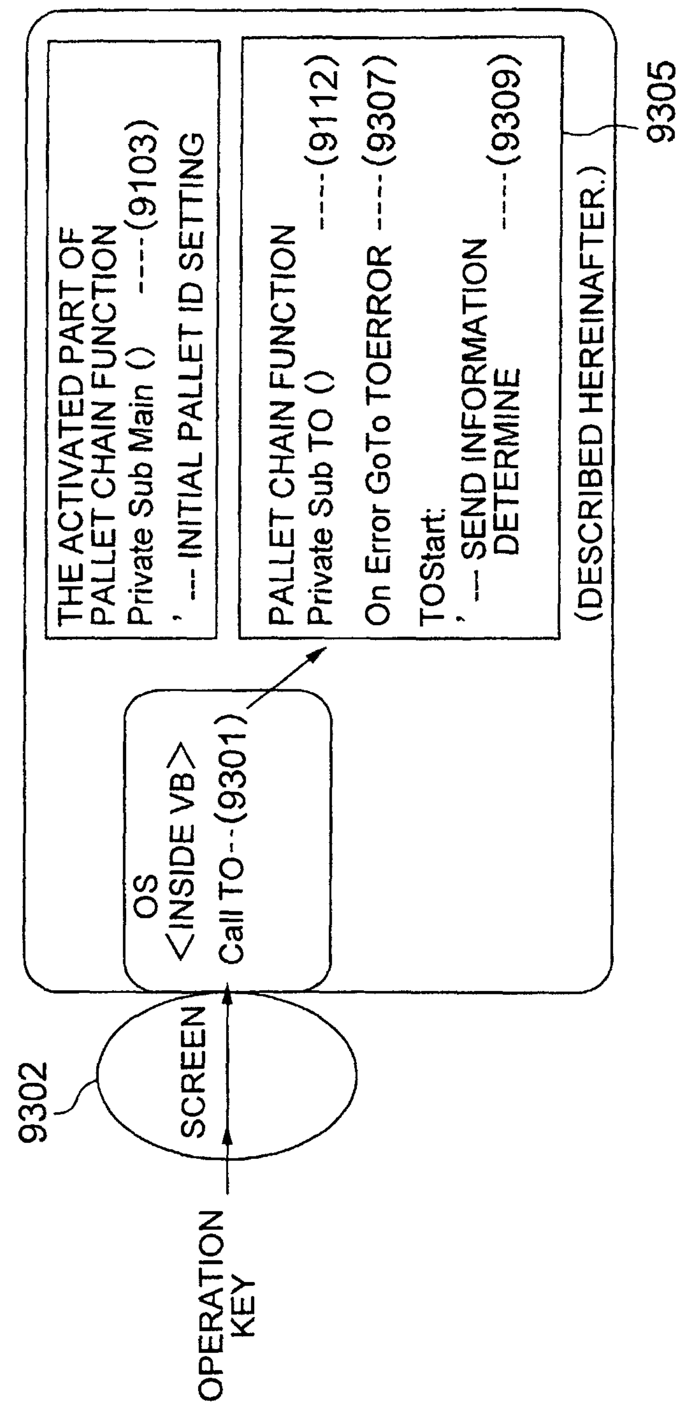
OPERATION KEY
9302
SCREEN
OS
<INSIDE VB>
Call TO--(9301)
THE ACTIVATED PART OF PALLET CHAIN FUNCTION
Private Sub Main () ----(9103)
' --- INITIAL PALLET ID SETTING
PALLET CHAIN FUNCTION
Private Sub TO () ----(9112)
On Error GoTo TOERROR ----(9307)
TOStart:
' --- SEND INFORMATION DETERMINE ----(9309)
(DESCRIBED HEREINAFTER.)
9305

# FIG. 94

```
--- NEXT PALLET ACTIVATE PREPARATION
    CTRL.PrvScrnID=CTRL. CurScrnID
    CTRL.CurScrnID=CTRL. NxtScrnID
    CTRL. NxtPltID=""
--- PALLET ACTIVATE
    Call PALLETCall
    GoTo TOStart

End Sub
```

```
'*****************************************************
'PALLET ACTIVATE
Public Sub PALLETCall ()
  Select Case CTRL. CurPltID
    Case PltID_GDSTCKSCRNW02
        Call GDSTCKSCRNW02         --------- (9401)
    Case PltID_GDSTCKSCRNW04
        Call GDSTCKSCRNW04         --------- (9402)
    Case PltID_GDSTCKSCRNW02
        Call GDSTCKSCRNW02
    Case PltID_GDSTCKSCRNW04
        Call GDSTCKSCRNW04         --------- (9404)
    Case PltID_GDSTCKSCRNW03       --------- (9403)
    Call GDSTCKSCRNW03     --------------- (9405)
  End Select
End Sub
```

FIG. 95

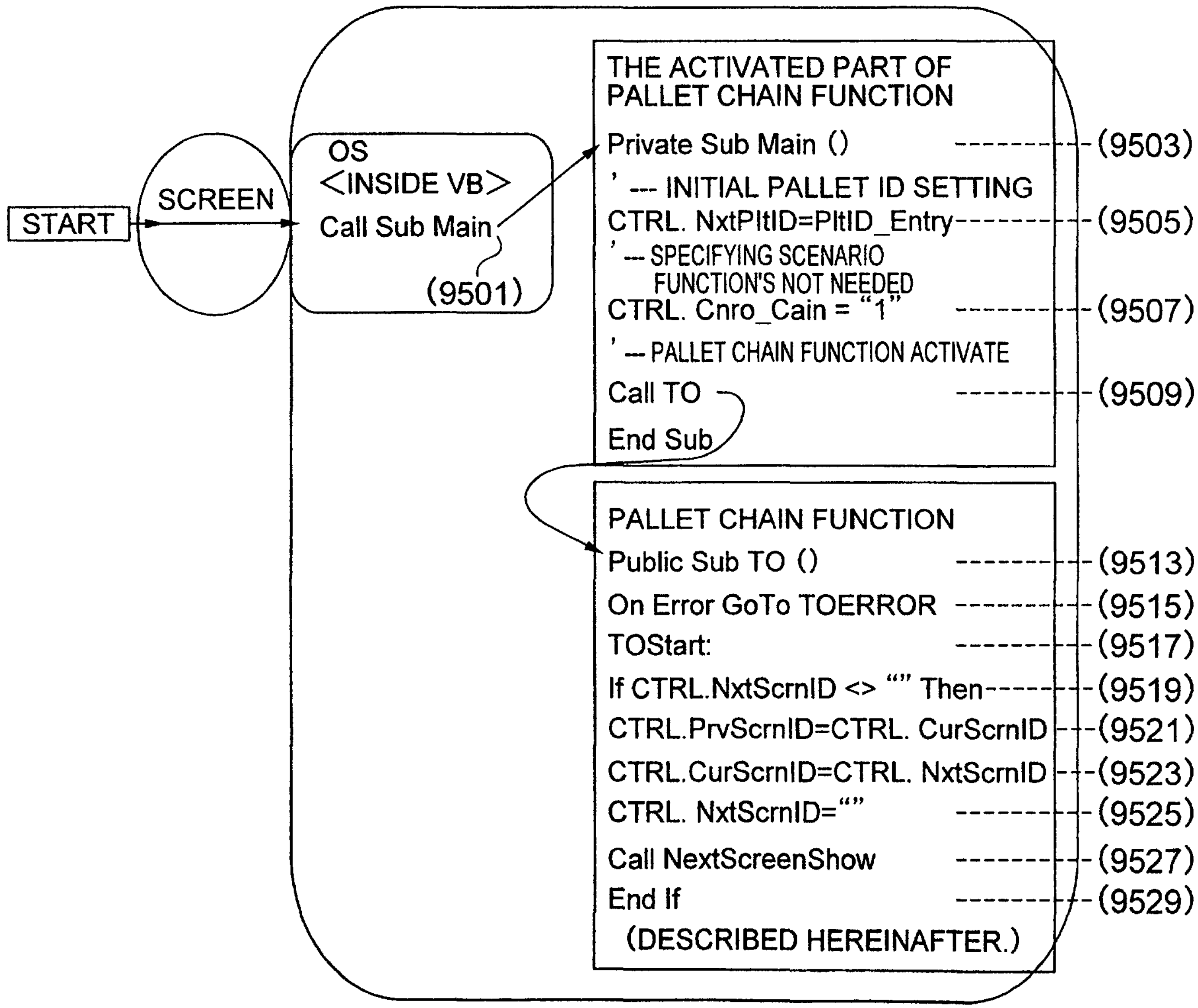
START
SCREEN
OS
<INSIDE VB>
Call Sub Main
(9501)
THE ACTIVATED PART OF PALLET CHAIN FUNCTION
Private Sub Main () (9503)
' --- INITIAL PALLET ID SETTING
CTRL. NxtPltID=PltID_Entry (9505)
' --- SPECIFYING SCENARIO FUNCTION'S NOT NEEDED
CTRL. Cnro_Cain = "1" (9507)
' --- PALLET CHAIN FUNCTION ACTIVATE
Call TO (9509)
End Sub
PALLET CHAIN FUNCTION
Public Sub TO () (9513)
On Error GoTo TOERROR (9515)
TOStart: (9517)
If CTRL.NxtScrnID <> "" Then (9519)
CTRL.PrvScrnID=CTRL. CurScrnID (9521)
CTRL.CurScrnID=CTRL. NxtScrnID (9523)
CTRL. NxtScrnID="" (9525)
Call NextScreenShow (9527)
End If (9529)
(DESCRIBED HEREINAFTER.)

FIG. 96

(a)

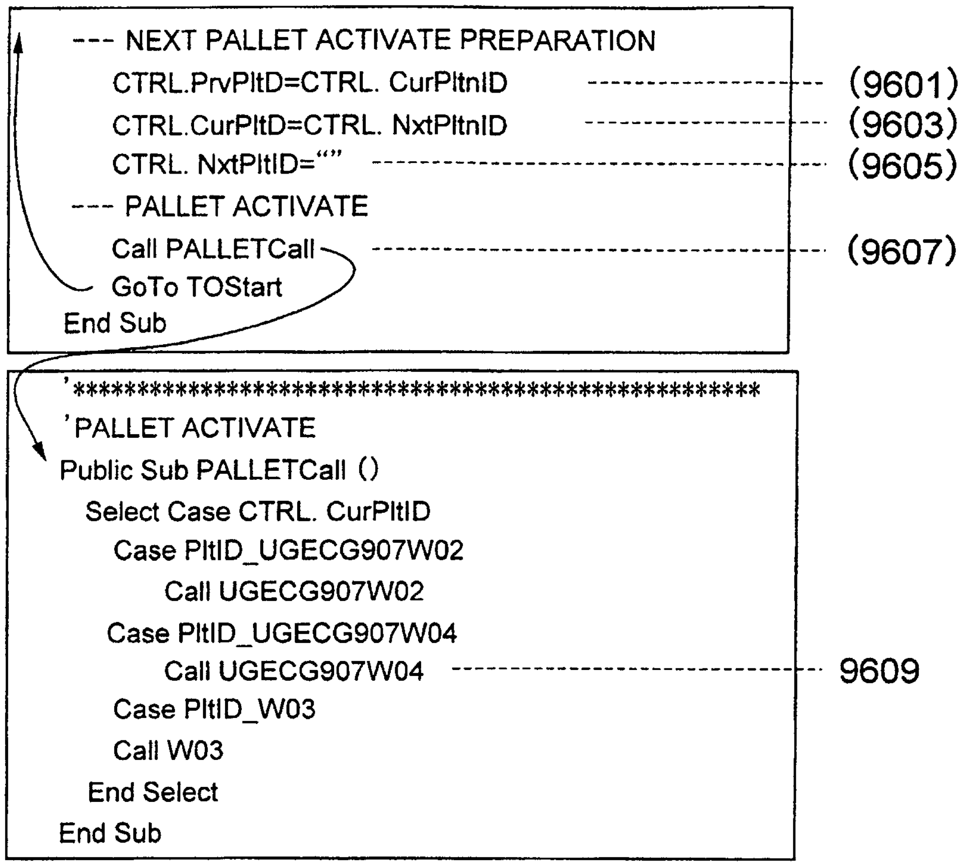
--- NEXT PALLET ACTIVATE PREPARATION
CTRL.PrvPltD=CTRL. CurPltnID
CTRL.CurPltD=CTRL. NxtPltnID
CTRL. NxtPltID=""
--- PALLET ACTIVATE
Call PALLETCall
GoTo TOStart
End Sub
(9601)
(9603)
(9605)
(9607)
'**************************************************
'PALLET ACTIVATE
Public Sub PALLETCall ()
Select Case CTRL. CurPltID
Case PltID_UGECG907W02
Call UGECG907W02
Case PltID_UGECG907W04
Call UGECG907W04
Case PltID_W03
Call W03
End Select
End Sub
9609

(b)

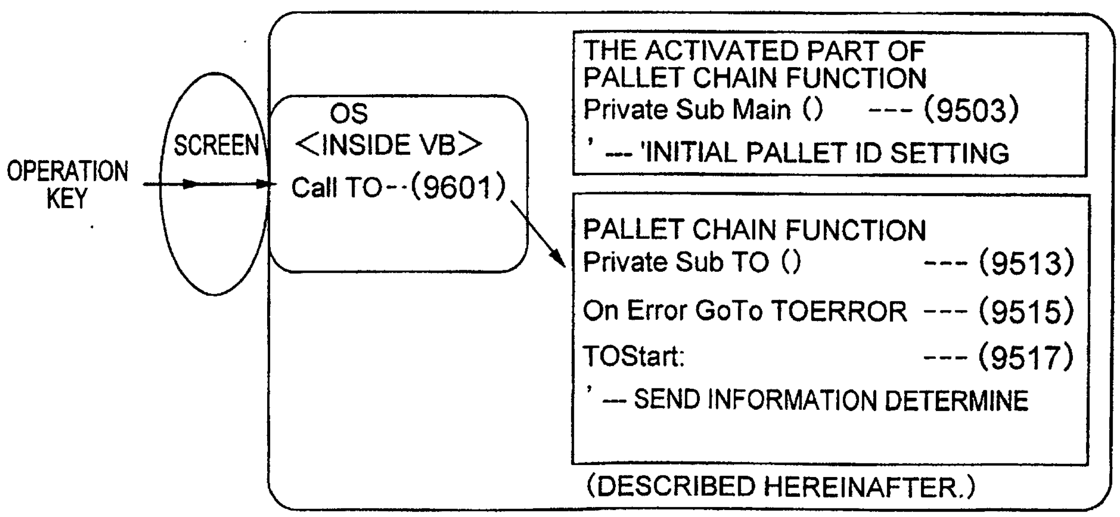
OPERATION KEY
SCREEN
OS
<INSIDE VB>
Call TO--(9601)
THE ACTIVATED PART OF PALLET CHAIN FUNCTION
Private Sub Main () --- (9503)
' --- 'INITIAL PALLET ID SETTING
PALLET CHAIN FUNCTION
Private Sub TO () --- (9513)
On Error GoTo TOERROR --- (9515)
TOStart: --- (9517)
' --- SEND INFORMATION DETERMINE
(DESCRIBED HEREINAFTER.)

# FIG. 97

```
--- NEXT PALLET ACTIVATE PREPARATION
    CTRL.PrvPltID=CTRL. CurPltID
    CTRL.CurPltID=CTRL. NxtPltID
    CTRL. NxtPltID=""
--- PALLET ACTIVATE
    Call PALLETCall
    GoTo TOStart
End Sub
```

```
'**************************************************
' PALLET ACTIVATE
Public Sub PALLETCall ()
  Select Case CTRL. CurPltID
    Case PltID_UGECG907W02
        Call UGECG907W02 ---------- (9701)
    Case PltID_UGECG907W04
        Call UGECG907W04
    Case PltID_W03 ---------- (9703)
    Call W03 ---------- (9705)
  End Select
End Sub
```

FIG. 98

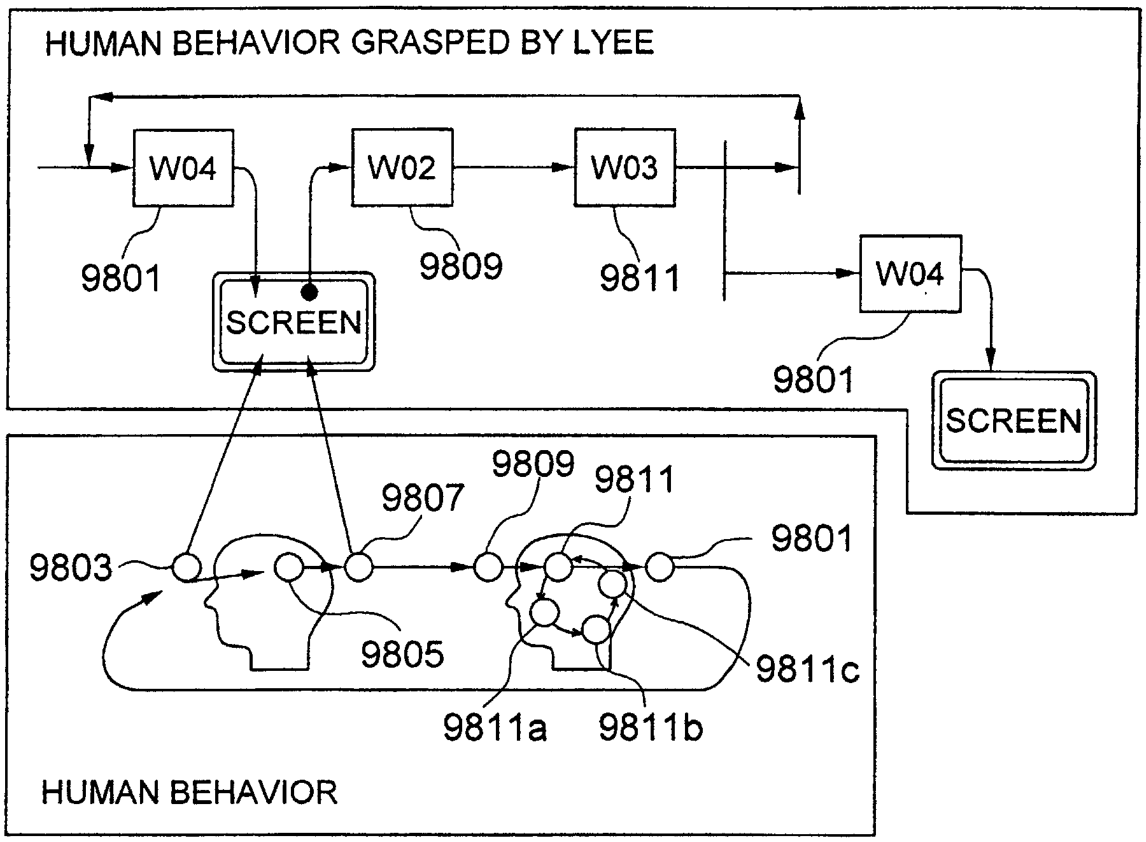
HUMAN BEHAVIOR GRASPED BY LYEE
W04
W02
W03
9801
9809
9811
SCREEN
W04
9801
SCREEN
9809
9811
9807
9803
9801
9805
9811c
9811a
9811b
HUMAN BEHAVIOR

FIG. 99

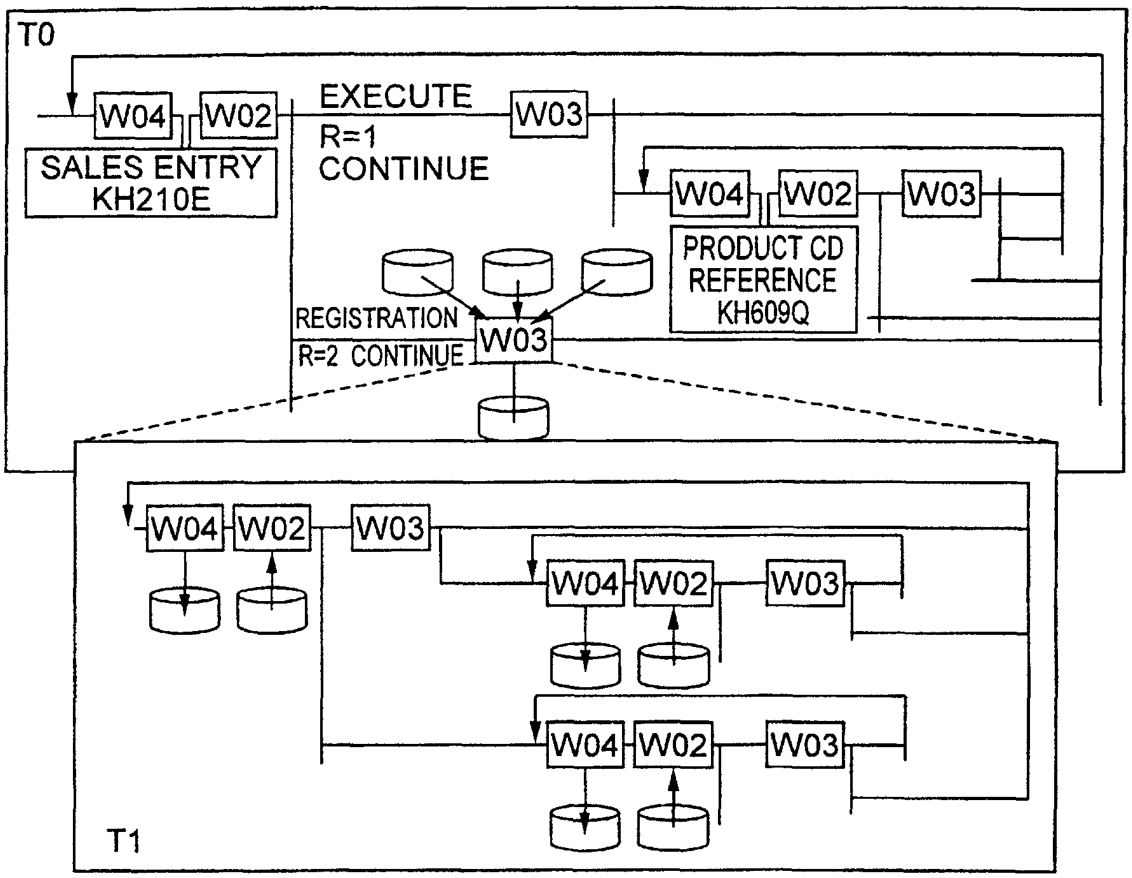
T0
W04
W02
EXECUTE
W03
R=1
CONTINUE
SALES ENTRY
KH210E
W04
W02
W03
PRODUCT CD
REFERENCE
KH609Q
REGISTRATION
W03
R=2 CONTINUE
W04
W02
W03
W04
W02
W03
W04
W02
W03
T1

FIG. 100

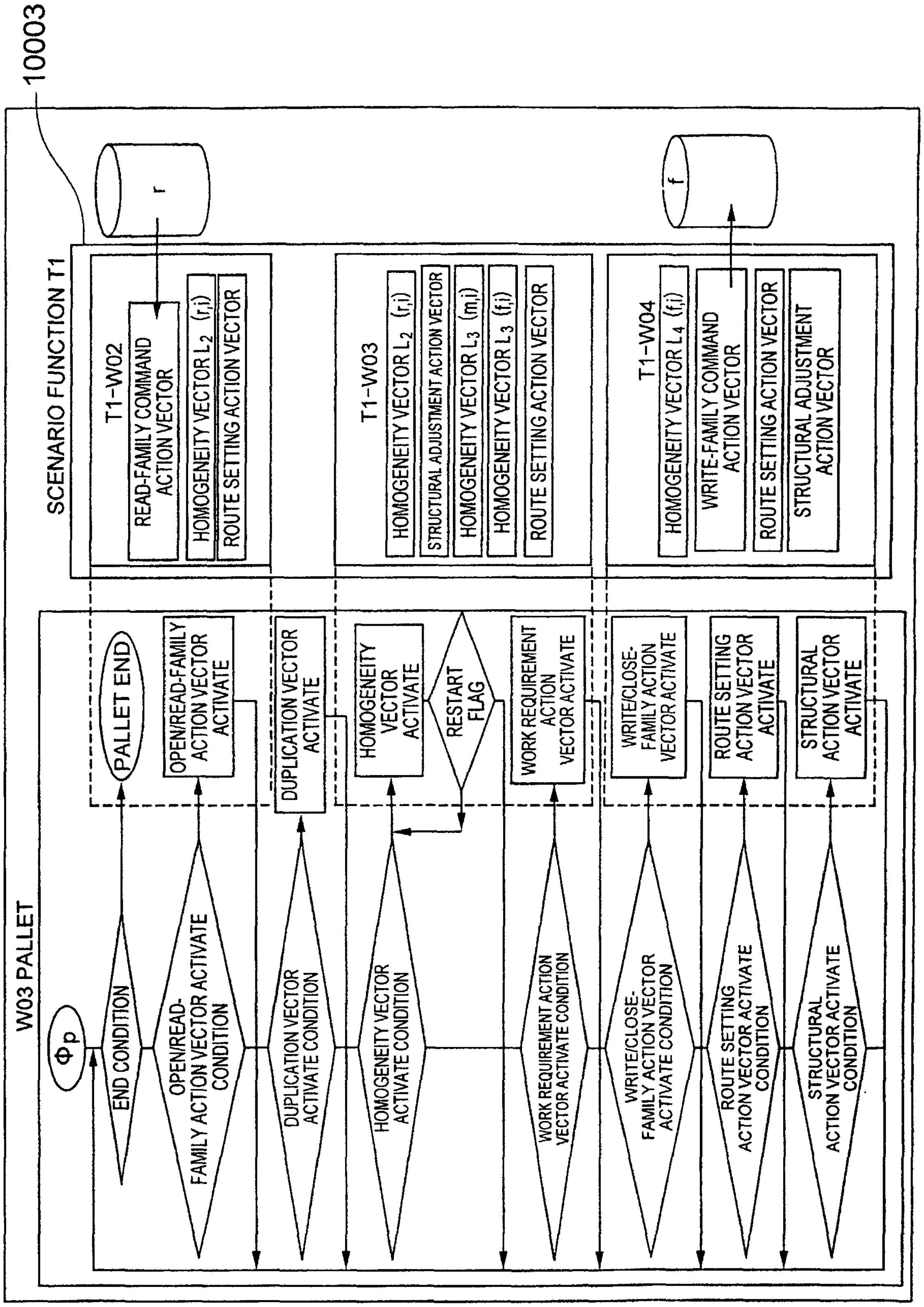

10003
W03 PALLET
Φp
END CONDITION
OPEN/READ-FAMILY ACTION VECTOR ACTIVATE CONDITION
DUPLICATION VECTOR ACTIVATE CONDITION
HOMOGENEITY VECTOR ACTIVATE CONDITION
WORK REQUIREMENT ACTION VECTOR ACTIVATE CONDITION
WRITE/CLOSE-FAMILY ACTION VECTOR ACTIVATE CONDITION
ROUTE SETTING ACTION VECTOR ACTIVATE CONDITION
STRUCTURAL ACTION VECTOR ACTIVATE CONDITION
PALLET END
OPEN/READ-FAMILY ACTION VECTOR ACTIVATE
DUPLICATION VECTOR ACTIVATE
HOMOGENEITY VECTOR ACTIVATE
RESTART FLAG
WORK REQUIREMENT ACTION VECTOR ACTIVATE
WRITE/CLOSE-FAMILY ACTION VECTOR ACTIVATE
ROUTE SETTING ACTION VECTOR ACTIVATE
STRUCTURAL ACTION VECTOR ACTIVATE
SCENARIO FUNCTION T1
T1-W02
READ-FAMILY COMMAND ACTION VECTOR
HOMOGENEITY VECTOR $L_2$ (r,i)
ROUTE SETTING ACTION VECTOR
T1-W03
HOMOGENEITY VECTOR $L_2$ (r,i)
STRUCTURAL ADJUSTMENT ACTION VECTOR
HOMOGENEITY VECTOR $L_3$ (m,i)
HOMOGENEITY VECTOR $L_3$ (f,i)
ROUTE SETTING ACTION VECTOR
T1-W04
HOMOGENEITY VECTOR $L_4$ (f,i)
WRITE-FAMILY COMMAND ACTION VECTOR
ROUTE SETTING ACTION VECTOR
STRUCTURAL ADJUSTMENT ACTION VECTOR
r
f

# FIG. 101

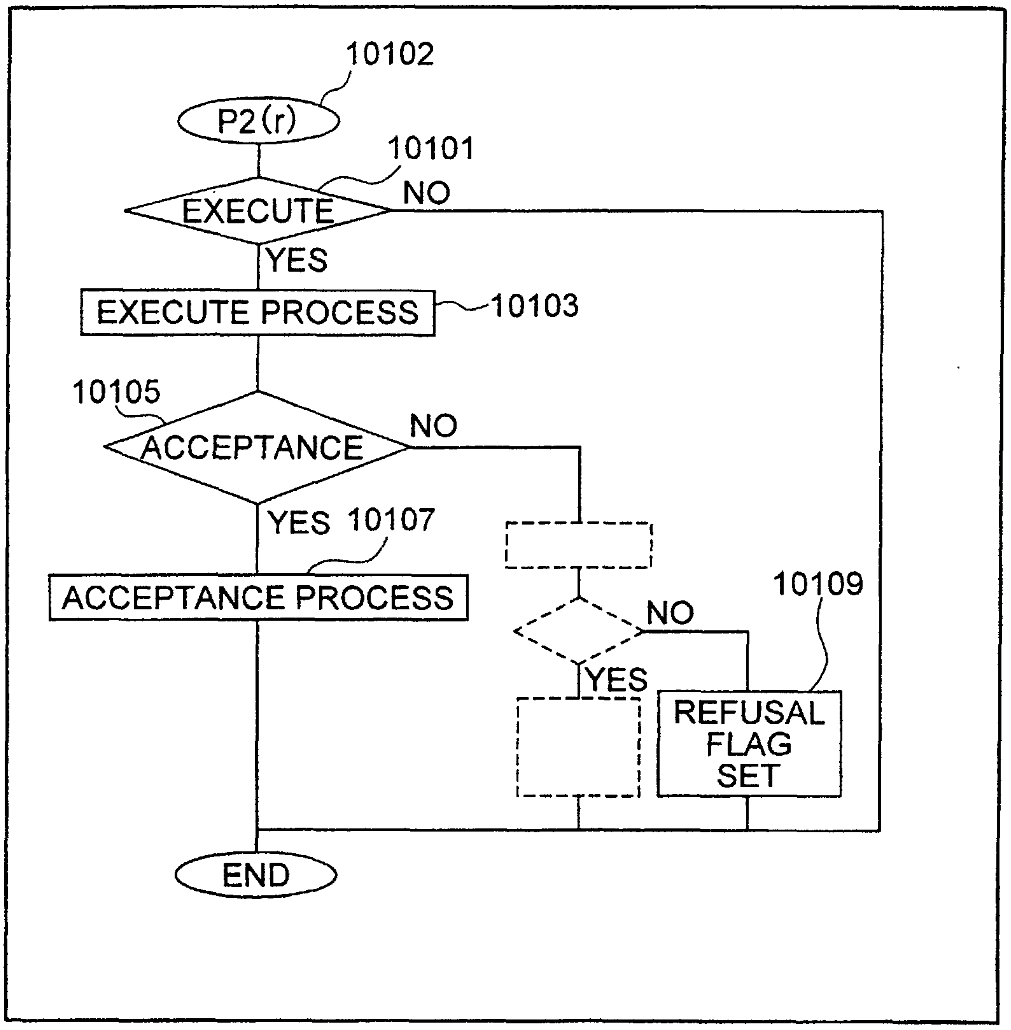
10102
P2(r)
10101
EXECUTE
NO
YES
EXECUTE PROCESS
10103
10105
ACCEPTANCE
NO
YES 10107
ACCEPTANCE PROCESS
NO
10109
YES
REFUSAL FLAG SET
END

FIG. 102

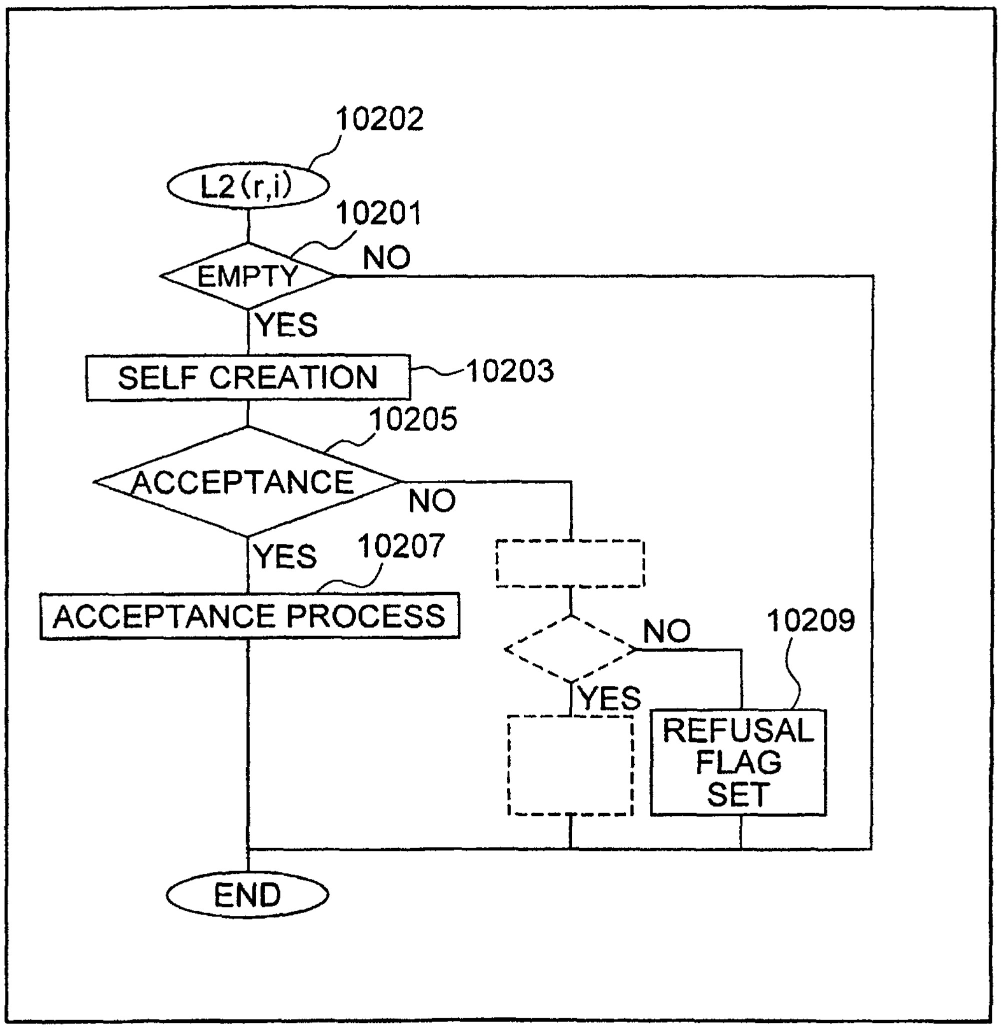
10202
L2(r,i)
10201
EMPTY
NO
YES
SELF CREATION
10203
10205
ACCEPTANCE
NO
YES
10207
ACCEPTANCE PROCESS
NO
10209
YES
REFUSAL FLAG SET
END

FIG. 103

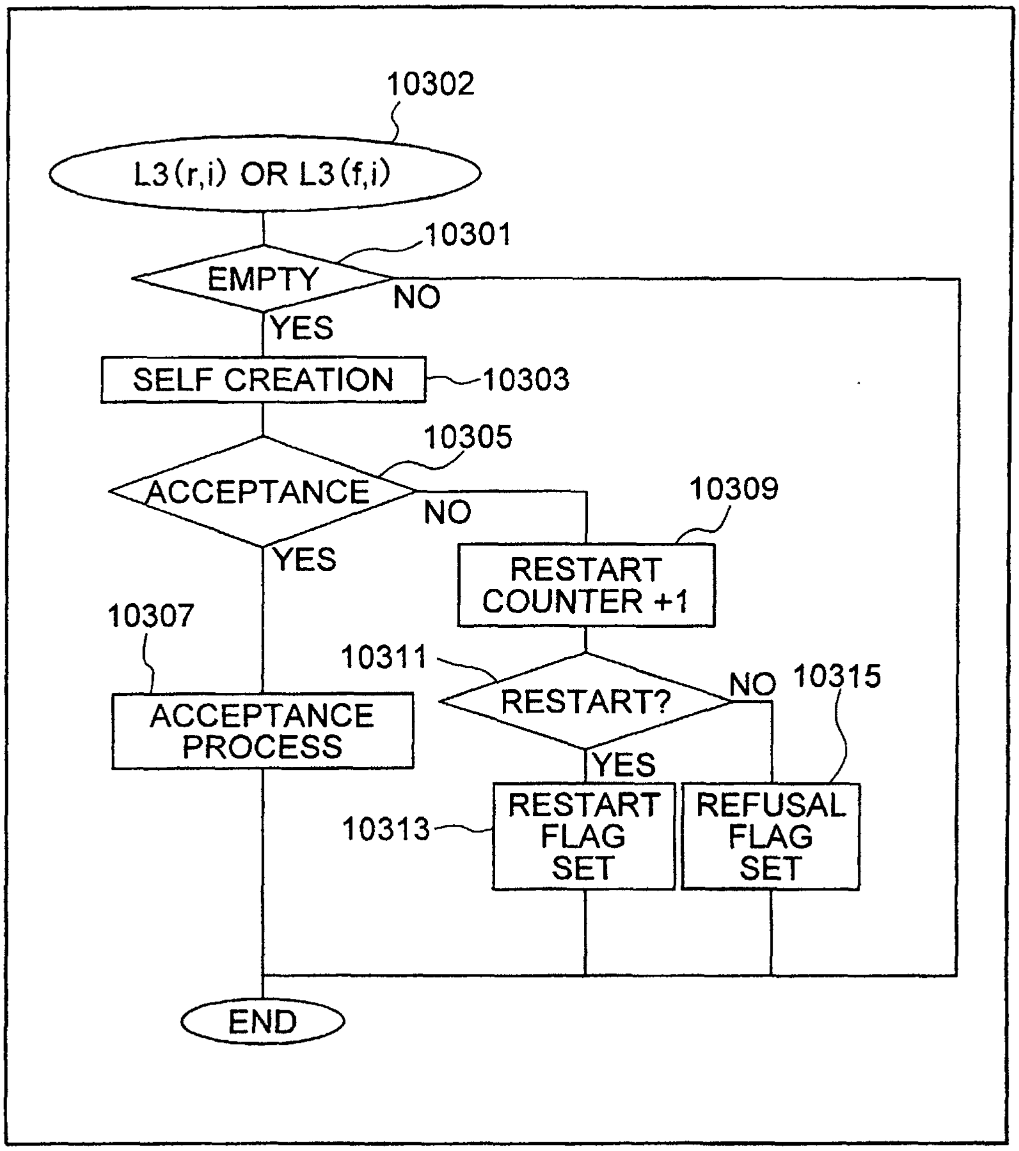
10302
L3(r,i) OR L3(f,i)
10301
EMPTY
NO
YES
SELF CREATION
10303
10305
ACCEPTANCE
NO
10309
YES
RESTART
COUNTER +1
10307
10311
RESTART?
NO
10315
ACCEPTANCE
PROCESS
YES
10313
RESTART
FLAG
SET
REFUSAL
FLAG
SET
END

FIG. 104

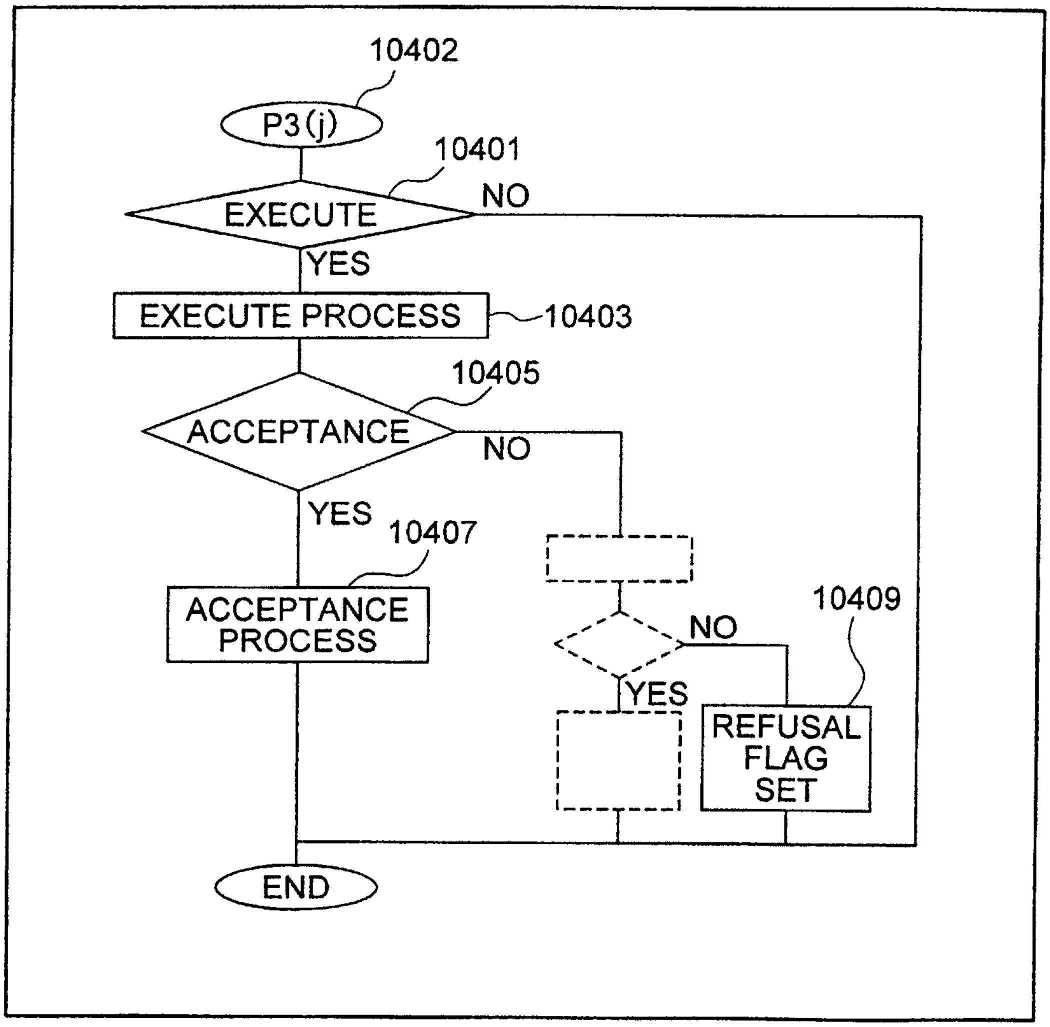
10402
P3(j)
10401
EXECUTE
NO
YES
EXECUTE PROCESS
10403
10405
ACCEPTANCE
NO
YES
10407
ACCEPTANCE
PROCESS
10409
NO
YES
REFUSAL
FLAG
SET
END

FIG. 105

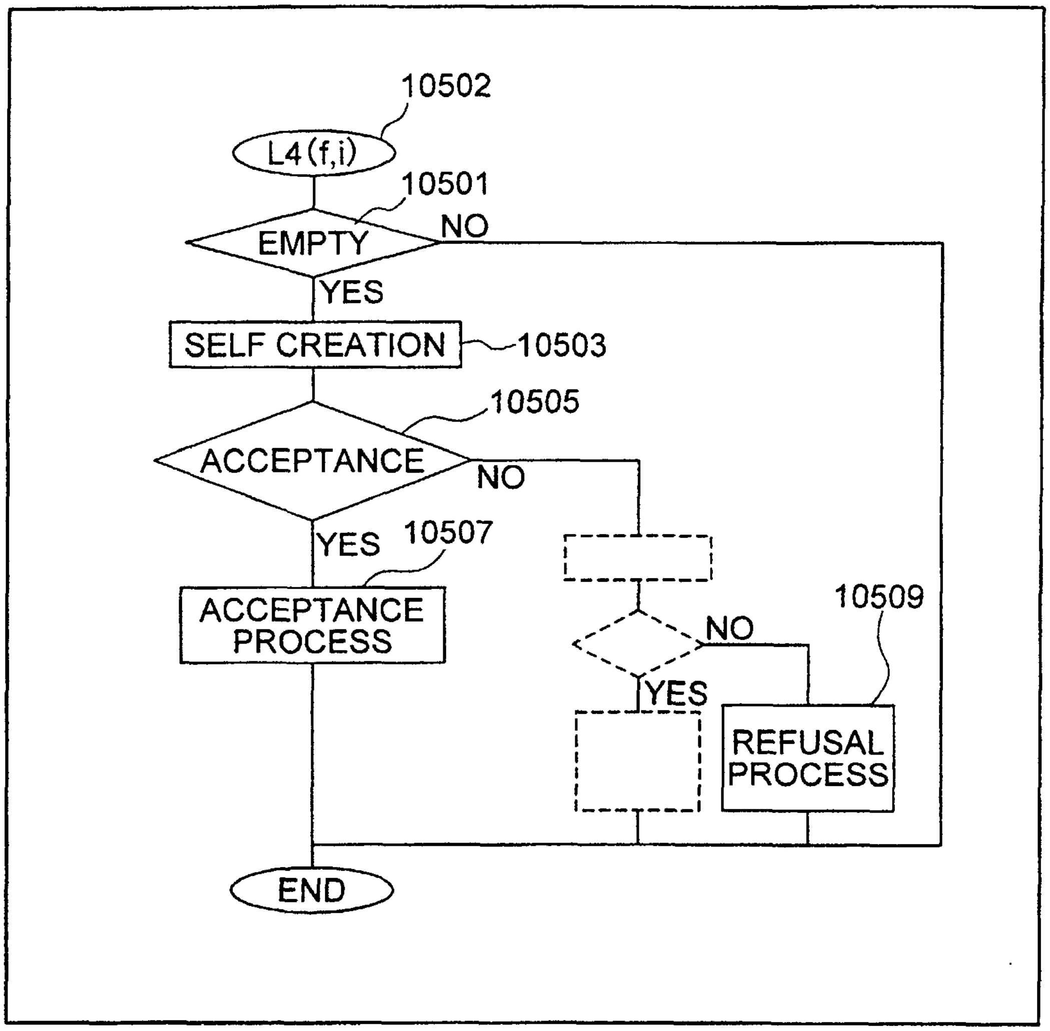
10502
L4(f,i)
10501
EMPTY
NO
YES
SELF CREATION
10503
10505
ACCEPTANCE
NO
YES
10507
ACCEPTANCE PROCESS
NO
10509
YES
REFUSAL PROCESS
END

FIG. 106

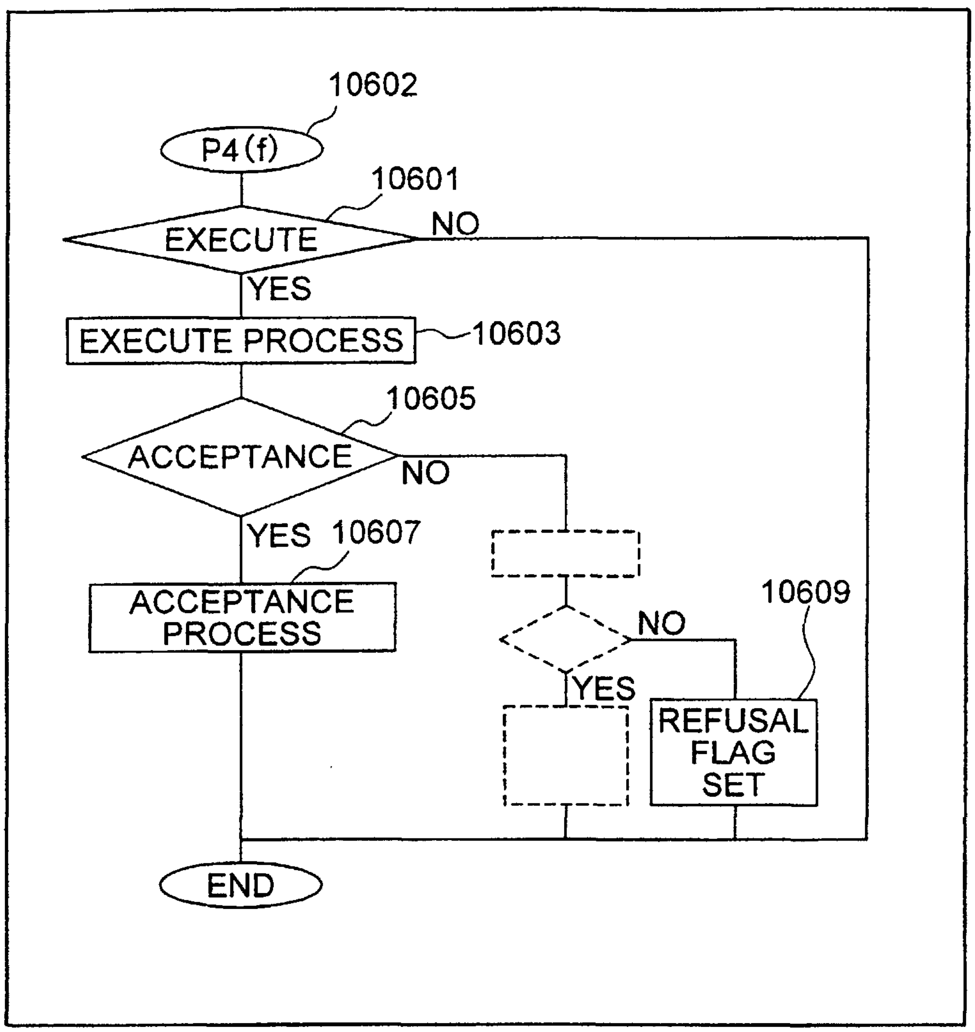
10602
P4(f)
10601
EXECUTE
NO
YES
EXECUTE PROCESS
10603
10605
ACCEPTANCE
NO
YES
10607
ACCEPTANCE PROCESS
10609
NO
YES
REFUSAL FLAG SET
END

# FIG. 107

10704 10703 10702 10701

- AT FIRST, CONFIRM <ALL CONTENTS> OF <CONVERSION VALUE STANDARD LEDGER> OF A CERTAIN <FACTORY>.

10716 10715

- IF NOT ALREADY ENTERED, <REGISTER> NEW <CONVERSION VALUE STANDARD>.

10714 10713 10718 10717

- IF ALREADY REGISTERED, <SELECT> <IT> AND , <CHANGE> <CONVERSION VALUE STANDARD>.

10714 10713 10770 10719

- ALSO, IF ALREADY REGISTERED, <SELECT> <IT> AND <DELETE> <CONVERSION VALUE STANDARD>.

10723 10721 10722 10725

- NOTE THAT <CONVERSION VALUE STANDARD> TO BE <REGISTERED> OR <CHANGED> MUST BE <ENABLED> ONLY
10724 10705
TO <COMPANY GENERAL STANDARD VALUE>. ALSO, <CONVERSION VALUE STANDARD CONTENTS> ARE
10706 10707 10708 10709
<CONVERSION CODE>, <COST CLASSIFICATION>, <PROCESS CLASSIFICATION>, <CONVERSION CLASSIFICATION>,
10710
<MANAGEMENT CLASSIFICATION>, <MANAGEMENT CLASSIFICATION NAME> AND
<MANUFACTURING COSTS TOTAL STANDARD VALUE>.
10711
10712

# FIG. 108

| WORK/FUNCTION NAME | DEFINITIVE NAME | DEFINITIVE IDENTIFIER | WHERE TO MOUNT | TYPE |
|---|---|---|---|---|
| CONVERSION VALUE STANDARD LEDGER MANAGEMENT | CONVERSION VALUE STANDARD LEDGER MANAGEMENT SCREEN | UGECG907 | CLIENT | SCREEN |
| | | | | |
| | | | | |

FIG. 109

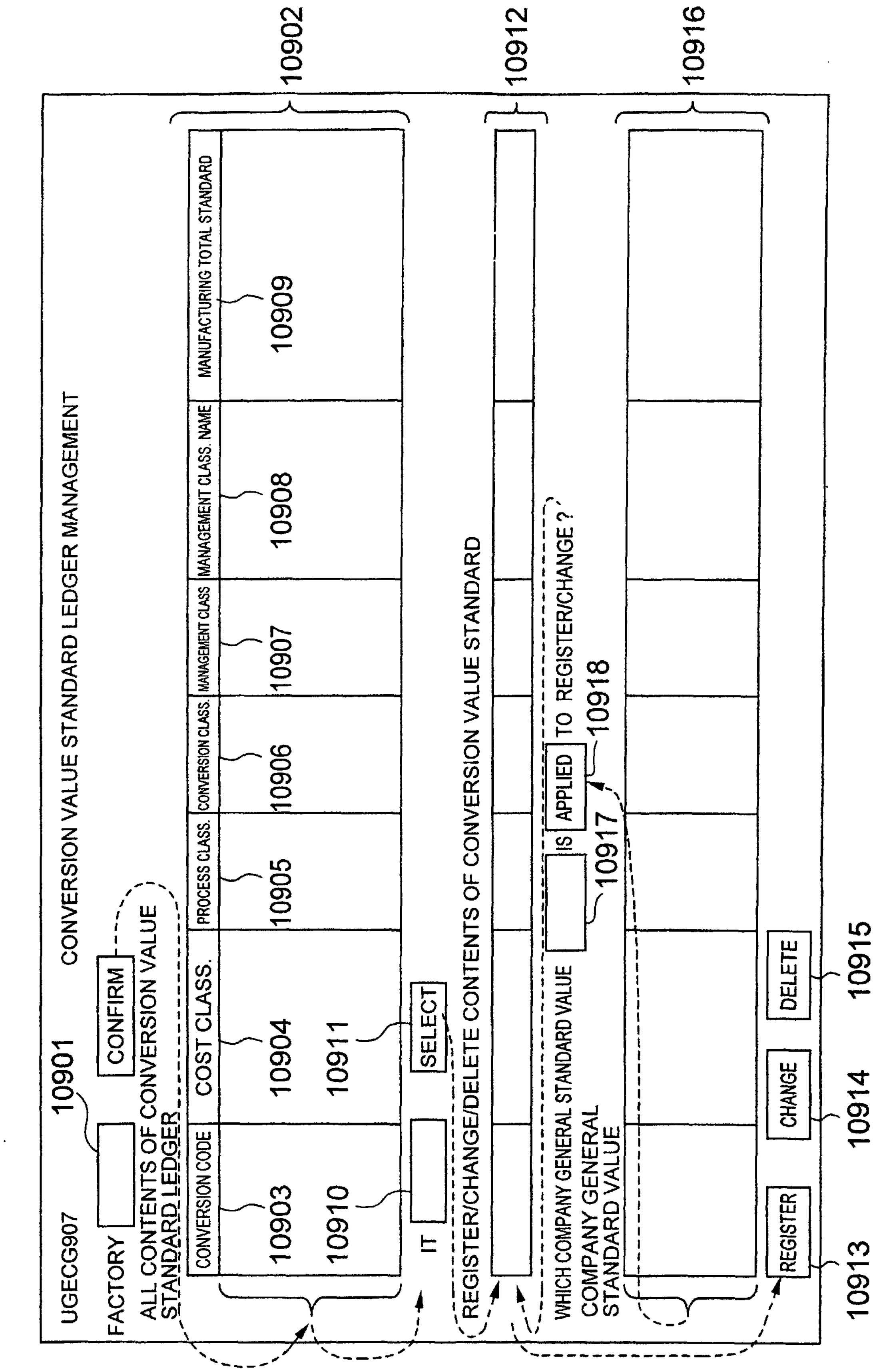
UGECG907
CONVERSION VALUE STANDARD LEDGER MANAGEMENT
FACTORY
10901
CONFIRM
ALL CONTENTS OF CONVERSION VALUE STANDARD LEDGER
CONVERSION CODE
COST CLASS.
PROCESS CLASS.
CONVERSION CLASS.
MANAGEMENT CLASS
MANAGEMENT CLASS. NAME
MANUFACTURING TOTAL STANDARD
10903
10904
10905
10906
10907
10908
10909
10910
10911
IT
SELECT
10902
REGISTER/CHANGE/DELETE CONTENTS OF CONVERSION VALUE STANDARD
10912
WHICH COMPANY GENERAL STANDARD VALUE
IS
APPLIED
TO REGISTER/CHANGE ?
10917
10918
COMPANY GENERAL STANDARD VALUE
10916
REGISTER
CHANGE
DELETE
10913
10914
10915

FIG. 110

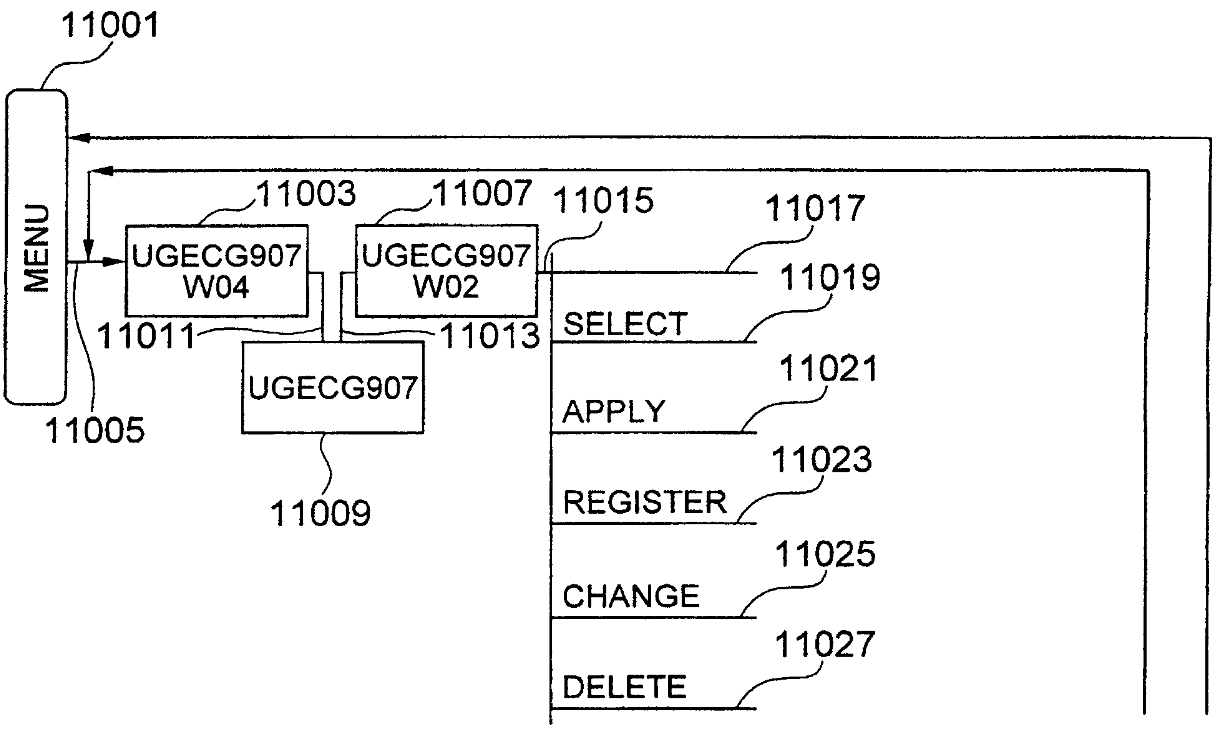
11001
MENU
11003
UGECG907
W04
11007
UGECG907
W02
11015
11017
11019
SELECT
11011
11013
UGECG907
11005
11021
APPLY
11023
REGISTER
11009
11025
CHANGE
11027
DELETE

FIG. 111

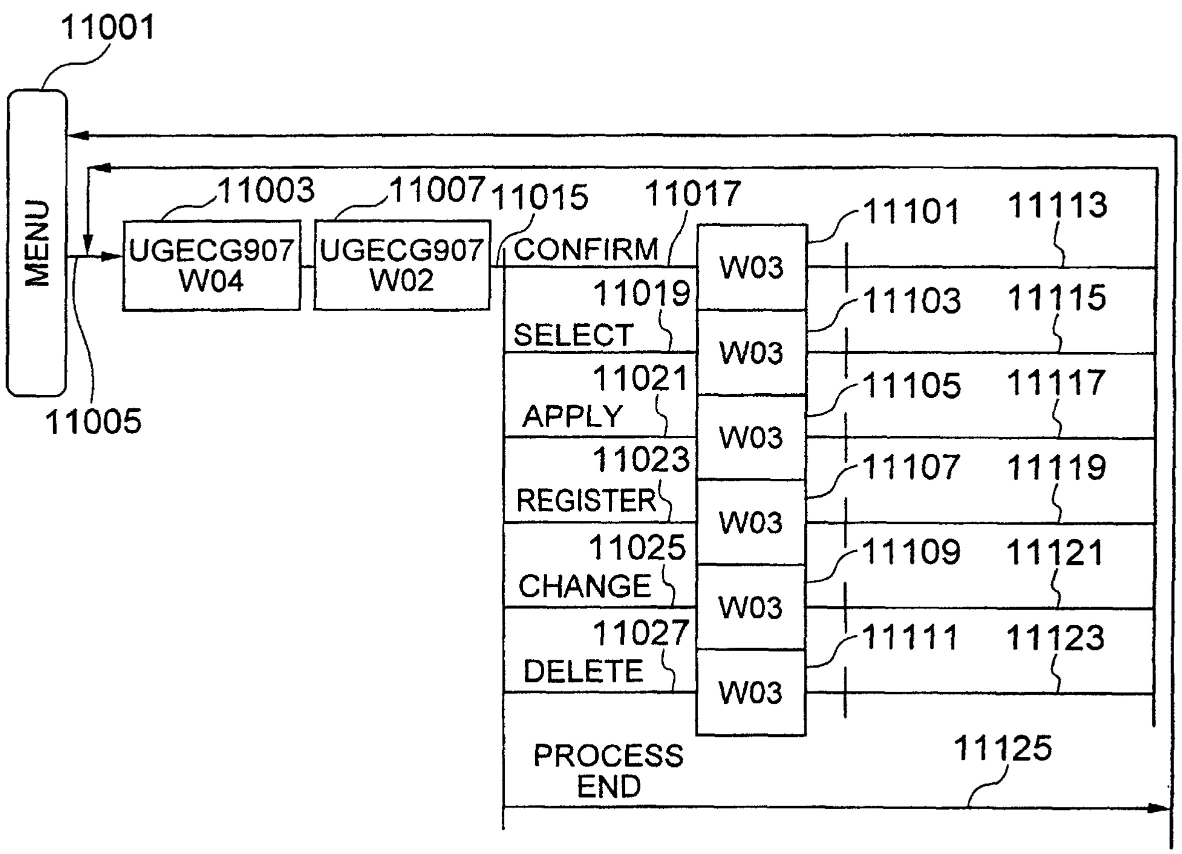
11001
MENU
11005
11003
UGECG907
W04
11007
UGECG907
W02
11015
11017
CONFIRM
11019
SELECT
11021
APPLY
11023
REGISTER
11025
CHANGE
11027
DELETE
PROCESS
END
W03
W03
W03
W03
W03
W03
11101
11103
11105
11107
11109
11111
11113
11115
11117
11119
11121
11123
11125

FIG. 112

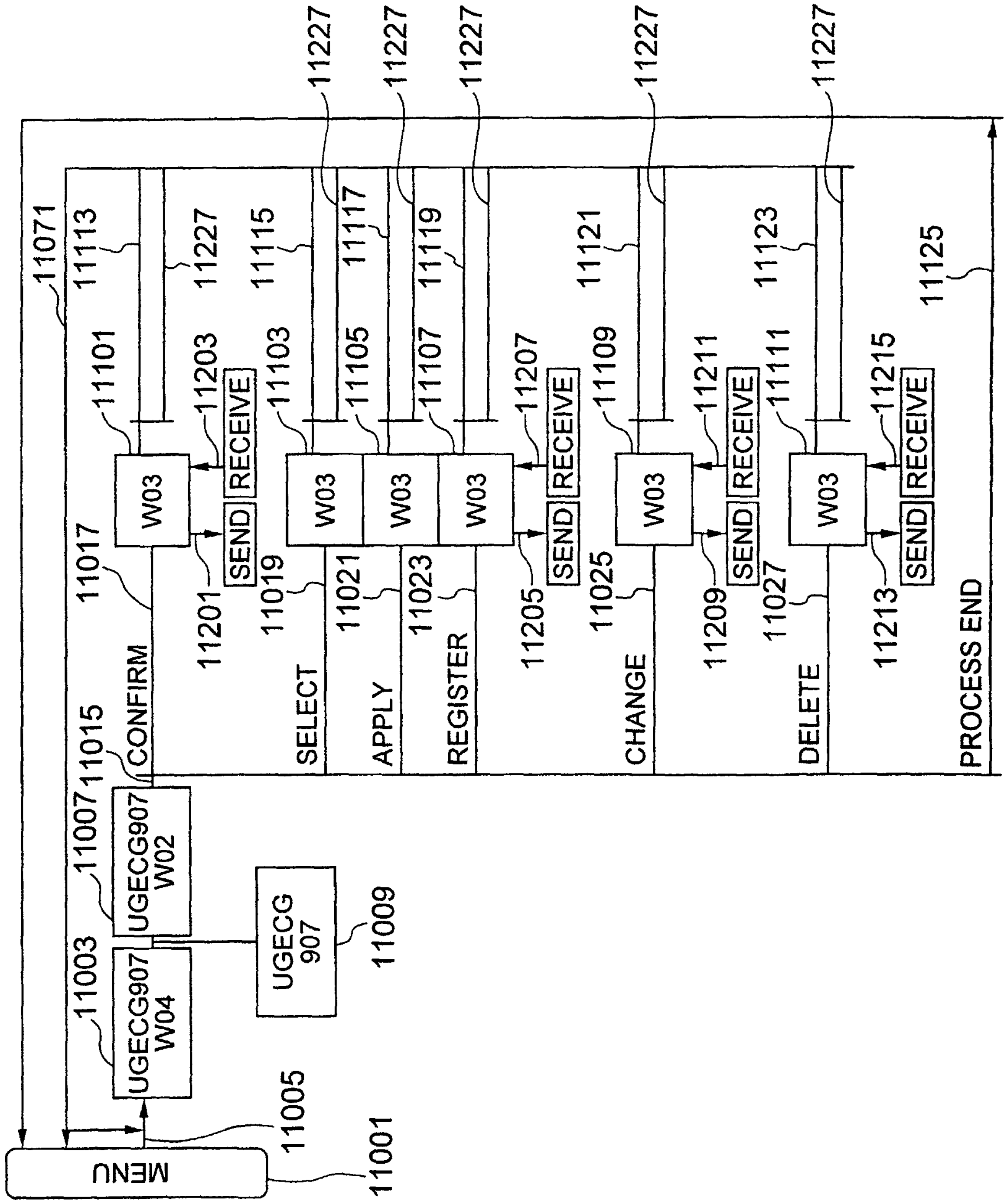

MENU
11001
11005
UGECG907 W04
11003
UGECG 907
11009
UGECG907 W02
11007
11015
CONFIRM
SELECT
APPLY
REGISTER
CHANGE
DELETE
PROCESS END
11017
11019
11021
11023
11025
11027
W03
SEND
RECEIVE
11201
11203
11205
11207
11209
11211
11213
11215
11101
11103
11105
11107
11109
11111
11113
11115
11117
11119
11121
11123
11125
11071
11227

# FIG. 113

11303 11309

| RECEIVE SCREEN (INPUT ATTRIBUTE) | CHARACTERISTICS | SEND SCREEN (OUTPUT ATTRIBUTE) | CHARACTERISTICS |
|---|---|---|---|
| FACTORY | SPECIFY ONE FROM PLURAL | FACTORY | INPUT DATA CODE AS IT IS. |
| CONVERSION VALUE STANDARD LEDGER CONTENTS | | CONVERSION VALUE STANDARD LEDGER CONTENTS | FACTORY-WISE CONVERSION CODE-WISE PLURAL RECORDS |
| COMPANY GENERAL STANDARD VALUE | | COMPANY GENERAL STANDARD VALUE | PATTERN-WISE PLURAL RECORDS |
| CONVERSION VALUE STANDARD FOR REGISTER/ CHANGE/DELETE | FACTORY-WISE SPECIFY ONE AGAINST PLURAL RECORDS | CONVERSION VALUE STANDARD FOR REGISTER/ CHANGE/DELETE | INPUT DATA CODE AS IT IS |

11301 11307 11313 11321

11305 11311 11317 11319 11323

11323 11315

FIG. 114

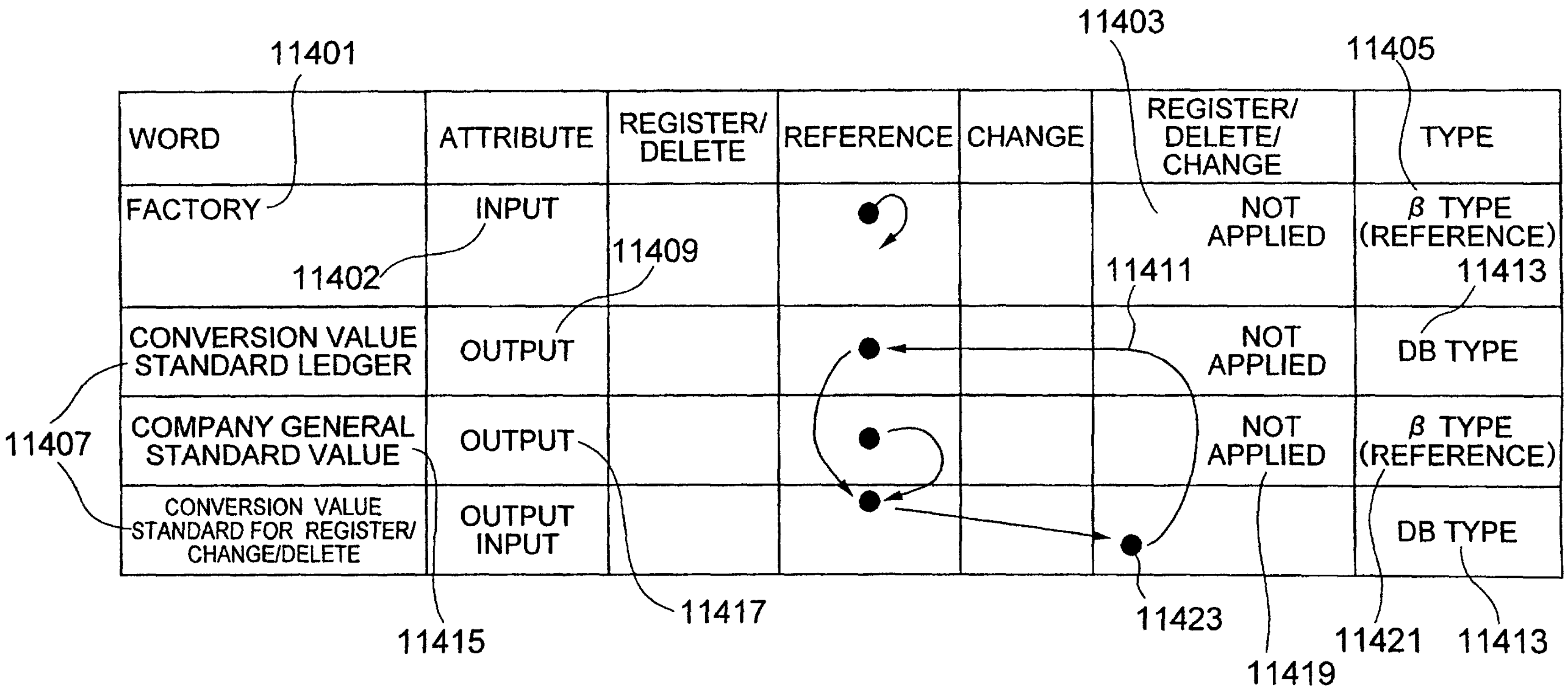
11401
11403
11405
WORD
ATTRIBUTE
REGISTER/ DELETE
REFERENCE
CHANGE
REGISTER/ DELETE/ CHANGE
TYPE
FACTORY
INPUT
NOT APPLIED
β TYPE (REFERENCE)
11402
11409
11411
11413
CONVERSION VALUE STANDARD LEDGER
OUTPUT
NOT APPLIED
DB TYPE
11407
COMPANY GENERAL STANDARD VALUE
OUTPUT
NOT APPLIED
β TYPE (REFERENCE)
CONVERSION VALUE STANDARD FOR REGISTER/ CHANGE/DELETE
OUTPUT INPUT
DB TYPE
11415
11417
11423
11419
11421
11413

FIG. 115

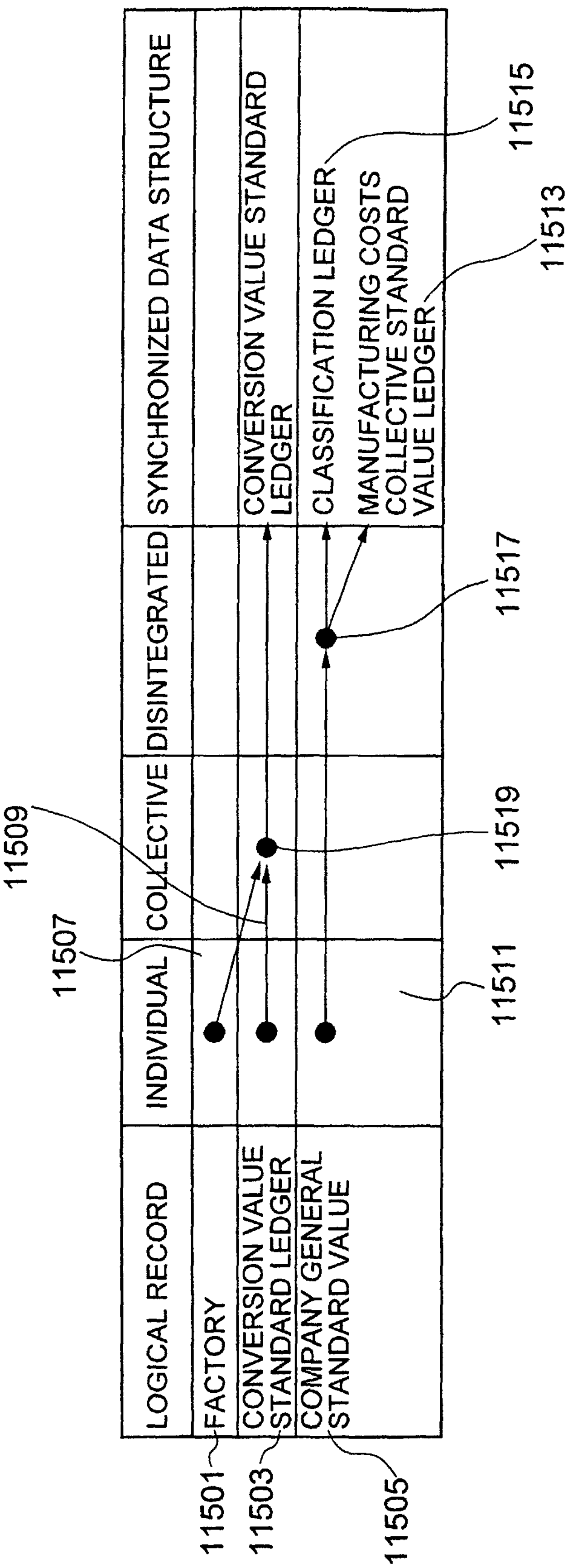

LOGICAL RECORD
INDIVIDUAL
COLLECTIVE
DISINTEGRATED
SYNCHRONIZED DATA STRUCTURE
FACTORY
CONVERSION VALUE STANDARD LEDGER
COMPANY GENERAL STANDARD VALUE
CONVERSION VALUE STANDARD LEDGER
CLASSIFICATION LEDGER
MANUFACTURING COSTS COLLECTIVE STANDARD VALUE LEDGER
11501
11503
11505
11507
11509
11511
11513
11515
11517
11519

# FIG. 116

| OPERATION/FUNCTION NAME | DEFINITIVE NAME | DEFINITIVE IDENTIFIER | WHERE TO MOUNT | TYPE |
|---|---|---|---|---|
| CONVERSION VALUE STANDARD LEDGER MANAGEMENT | CONVERSION VALUE STANDARD LEDGER MANAGEMENT SCREEN | UGECG907 | CLIENT | SCREEN |
| | CLASSIFICATION LEDGER | UGECF110 | SERVER | β |
| | MANUFACTURINGCOSTSCOLLECTIVE STANDARD VALUE LEDGER | UGECF120 | SERVER | β |
| | CONVERSION VALUE STANDARD LEDGER | UGECD100 | SERVER | DB |
| | | | | |
| CLASSIFICATION LEDGER MANAGEMENT | CLASSIFICATION LEDGER MANAGEMENT SCREEN | UGECG110 | CLIENT | SCREEN |
| | CLASSIFICATION LEDGER | UGECF110 | SERVER | DB |
| | | | | |
| MANUFACTURING COSTS COLLECTIVE STANDARD VALUE LEDGER MANAGEMENT | MANUFACTURING COSTS COLLECTIVE STANDARD VALUE LEDGER MANAGEMENT SCREEN | UGECG120 | CLIENT | SCREEN |
| | MANUFACTURING COSTS STANDARD VALUE LEDGER | UGECF120 | SERVER | DB |

FIG. 117

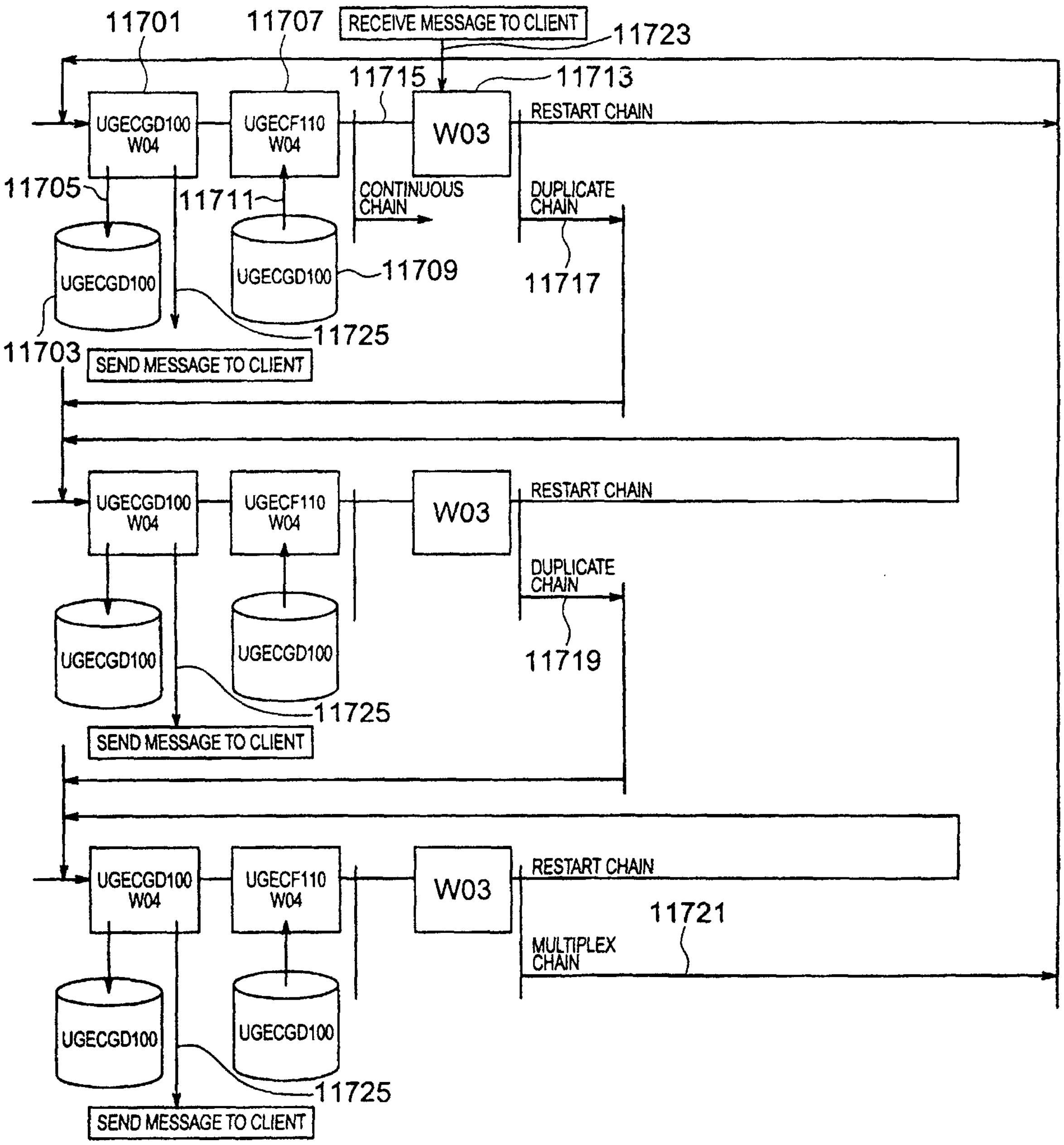
11701
11707
RECEIVE MESSAGE TO CLIENT
11723
11715
11713
UGECGD100
W04
UGECF110
W04
W03
RESTART CHAIN
11705
11711
CONTINUOUS
CHAIN
DUPLICATE
CHAIN
UGECGD100
UGECGD100
11709
11717
11725
11703
SEND MESSAGE TO CLIENT
UGECGD100
W04
UGECF110
W04
W03
RESTART CHAIN
DUPLICATE
CHAIN
UGECGD100
UGECGD100
11719
11725
SEND MESSAGE TO CLIENT
UGECGD100
W04
UGECF110
W04
W03
RESTART CHAIN
11721
MULTIPLEX
CHAIN
UGECGD100
UGECGD100
11725
SEND MESSAGE TO CLIENT

# FIG. 118

| CLASSIFICATION OF T0/T1 | PALLET INDENTIFIER | DEFINITIVE IDENTIFIER | ACTION OPERATOR OR COMMAND IDENTIFIER |
|---|---|---|---|
| T0 | UGECG907W04 | UGECG907 | |
| T0 | UGECG907W02 | UGECG907 | CAPTURE |
| | | | SELECT |
| | | | APPLY |
| | | | REGISTER |
| | | | CHANGE |
| | | | DELETE |
| | | | PROCESS END |
| T0 | UGECG907W03 | UGECG907 | |
| | | CAPTURED SEND MSG | CAPTURE |
| | | CAPTURED RECEIVE MSG | CAPTURED |
| | | REGISTER SEND MSG | REGISTER |
| | | REGISTER RECEIVE MSG | REGISTER |
| | | CHANGE SEND MSG | CHANGE |
| | | CHANGE RECEIVE MSG | CHANGE |
| | | DELETE SEND MSG | DELETE |
| | | DELETE RECEIVE MSG | DELETE |
| T1 | UGECD100W04 | UGECD100 | UGED1000PENW |
| | | | UGED100WRITE |
| | | | UGED100CLOSW |
| | UGECF110W02 | UGECF110 | UGECF1100PENR |
| | | | UGECF110READ |
| | | | UGECF110CLOSR |
| | UGECF120W02 | UGECF120 | UGECF1200PENR |
| | | | UGECF120READ |
| | | | UGECF120CLOSR |
| T1 | UGECD100W02 | UGECD100 | UGECD1000PENR |
| | | | UGECD100READ |
| | | | UGECD100CLOSR |
| | W03 | | UGECF100 RESTART CHAIN |
| | | | UGECF100 MULTIPLEX CHAIN |

# FIG. 119

| ITEM# | KIND | NAME | IDENTIFIER | ATTRI-BUTE | ATTRI-BUTE | I/O | ORDI-NATION |
|---|---|---|---|---|---|---|---|
| 1 | BASE | FACTORY CODE | FACTD | LETTERS | 5 | INPUT | |
| 2 | BASE | CONFIRM | QURYCM | COMMAND | 1 | INPUT | |
| 3 | BASE | CONVERSION CODE | CHNGCD | LETTERS | 10 | OUTPUT | 15 |
| 4 | BASE | COSTS CLASSIFICATION | SRCECD | LETTERS | 12 | OUTPUT | 15 |
| 5 | BASE | PROCESS CLASSIFICATION | PHSECD | LETTERS | 02 | OUTPUT | 15 |
| 6 | BASE | CONVERSION CLASSIFICATION | CHNGAX | NUMERALS | 05 | OUTPUT | 15 |
| 7 | BASE | MANAGEMENT CLASSIFICATION | MANGCD | LETTERS | 07 | OUTPUT | 15 |
| 8 | BASE | MANAGEMENT CLA-SSIFICATION NAME | NANGNM | LETTERS | 25 | OUTPUT | 15 |
| 9 | BASE | MANUFACTURING COSTS CO-LLECTIVE STANDARD VALUE | MKELVL | NUMERALS | 15 | OUTPUT | 15 |
| 10 | BASE | SELECT OBJECT | SELOBJ | NUMERALS | 02 | INPUT | |
| 11 | BASE | SELECT | SELCCM | COMMAND | 1 | INPUT | |
| 12 | BASE | COMPANY GENERAL CONVERSION CODE | CNTCHNGCD | LETTERS | 10 | OUTPUT | 5 |
| 13 | BASE | COMPANY GENERAL COSTS CLASSIFICATION | CNTSRCECD | LETTERS | 12 | OUTPUT | 5 |
| 14 | BASE | COMPANY GENERAL PR-OCESS CLASSIFICATION | CNTPHSECD | LETTERS | 02 | OUTPUT | 5 |
| 15 | BASE | COMPANY GENERAL CON-VERSION CLASSIFICATION | CNTCHNGAX | NUMERALS | 05 | OUTPUT | 5 |
| 16 | BASE | COMPANY GENERAL MANA-GEMENT CLASSIFICATION | CNTMANGCD | LETTERS | 07 | OUTPUT | 5 |
| 17 | BASE | COMPANY GENERAL MANAGE-MENT CLASSIFICATION NAME | CNTMANGNM | LETTERS | 25 | OUTPUT | 5 |
| 18 | BASE | COMPANY GENERAL MANU-FACTURING COSTS COLLE-CTIVE STANDARD VALUE | CNTMKELVL | NUMERALS | 15 | OUTPUT | 5 |
| 19 | BASE | APPLIED COMPANY GENE-RAL STANDARD VALUE | SELCMNLVL | NUMERALS | 01 | INPUT | |
| 20 | BASE | APPLY | SELCMN | COMMAND | 1 | INPUT | |
| 21 | BASE | RGISTER | ENTORY | COMMAND | 1 | INPUT | |
| 22 | BASE | CHANGE | CHANGE | COMMAND | 1 | INPUT | |
| 23 | BASE | DELETE | DELEAT | COMMAND | 1 | INPUT | |

# FIG. 120

| | | | | | | | |
|---|---|---|---|---|---|---|---|
| 24 | | PROCESS END | ENDEND | COMMAND | 1 | INPUT | |
| 25 | BASE | REGISTER CONVERSION CODE | ENTCHNGCD | LETTERS | 10 | OUTPUT | |
| 26 | BASE | REGISTER COSTS CLASSIFICATION | ENTSRCECD | LETTERS | 12 | OUTPUT | |
| 27 | BASE | REGISTER PROCESS CLASSIFICATION | ENTPHSECD | LETTERS | 02 | OUTPUT | |
| 28 | BASE | REGISTER CONVERSION CLASSIFICATION | ENTCHNGAX | NUMERALS | 05 | OUTPUT | |
| 29 | BASE | REGISTER MANAGEMENT CLASSIFICATION | ENTMANGCD | LETTERS | 07 | OUTPUT | |
| 30 | BASE | REGISTER MANAGEMENT CLASSIFICATION NAME | ENTMANGNM | LETTERS | 25 | OUTPUT | |
| 31 | BASE | REGISTER MANUFACTUR-ING COSTS COLLECTIVE VALUE STANDARD | ENTMKELVL | NUMERALS | 15 | OUTPUT | |
| 32 | BASE | SELECT LINE NUMBER | SELLINENO | NUMERALS | 2 | OUTPUT | 15 |
| 33 | BASE | APPLY LINE NUMBER | APLLINENO | NUMERALS | 2 | OUTPUT | 5 |
| 34 | ACTION | ROUTE SETTING | UGECG907RT | | | | |
| 35 | ACTION | FILE-RELATED REFU-SAL FLAG RESET | PCH1 | | | | |
| 36 | ACTION | FILE-RELATED DATA FIELD CHANGE | PCH2 | | | | |
| 37 | ACTION | MESSAGE FILE OPEN | FMSGOPEN | | | | |
| 38 | ACTION | FILE WORD ERROR CODE DETERMINE | FFALSECD | | | | |
| 39 | ACTION | MESSAGE FILE READ | FMSGREAD | | | | |
| 40 | ACTION | MESSAGE TEXT EDIT | MSGTXTED | | | | |
| 41 | ACTION | MESSAGE FILE CLOSE | FMSGCLSE | | | | |

# FIG. 121

| ITEM# | KIND | NAME | IDENTIFIER | ATTRI-BUTE | ATTRI-BUTE | I/O | ORDI-NATION |
|---|---|---|---|---|---|---|---|
| 1 | BASE | FACTORY CODE | FACTD | LETTERS | 5 | INPUT | |
| 2 | BASE | CONFIRM | QURYCM | COMMAND | 1 | INPUT | |
| 3 | BASE | CONVERSION CODE | CHNGCD | LETTERS | 10 | OUTPUT | 15 |
| 4 | BASE | PROCESS CLASSIFICATION | SRCECD | LETTERS | 12 | OUTPUT | 15 |
| 5 | BASE | PROCESS CLASSIFICATION | PHSECD | LETTERS | 02 | OUTPUT | 15 |
| 6 | BASE | CONVERSION CLASSIFICATION | CHNGAX | NUMERALS | 05 | OUTPUT | 15 |
| 7 | BASE | MANAGEMENT CLASSIFICATION | MANGCD | LETTERS | 07 | OUTPUT | 15 |
| 8 | BASE | MANAGEMENT CLASS. NAME | MANGNM | LETTERS | 25 | OUTPUT | 15 |
| 9 | BASE | MANUFACTURING COSTS CO-LLECTIVE STANDARD VALUE | MKELVL | NUMERALS | 15 | OUTPUT | 15 |
| 10 | BASE | SELECT OBJECT | SELOBJ | NUMERALS | 02 | INPUT | |
| 11 | BASE | SELECT | SELCCM | COMMAND | 1 | INPUT | |
| 12 | BASE | COMPANY GENERAL CONVERSION CODE | CNTCHNGCD | LETTERS | 10 | OUTPUT | 5 |
| 13 | BASE | COMPANY GENERAL COSTS CLASSIFICATION | CNTSRCECD | LETTERS | 12 | OUTPUT | 5 |
| 14 | BASE | COMPANY GENERAL PR-OCESS CLASSIFICATION | CNTPHSECD | LETTERS | 02 | OUTPUT | 5 |
| 15 | BASE | COMPANY GENERAL CON-VERSION CLASSIFICATION | CNTCHNGAX | NUMERALS | 05 | OUTPUT | 5 |
| 16 | BASE | COMPANY GENERAL MANA-GEMENT CLASSIFICATION | CNTMANGCD | LETTERS | 07 | OUTPUT | 5 |
| 17 | BASE | COMPANY GENERAL MANA-GEMENT CLASS. NAME | CNTMANGNM | LETTERS | 25 | OUTPUT | 5 |
| 18 | BASE | COMPANY GENERAL COSTS COLLECTIVE STANDARD VALUE | CNTMKELVL | NUMERALS | 15 | OUTPUT | 5 |
| 19 | BASE | APPLIED COMPANY GENE-RAL STANDARD VALUE | SELCMNLVL | NUMERALS | 01 | INPUT | |
| 20 | BASE | APPLY | SENCMN | COMMAND | 1 | INPUT | |
| 21 | BASE | REGISTER | ENTORY | COMMAND | 1 | INPUT | |
| 22 | BASE | CHANGE | CHENGE | COMMAND | 1 | INPUT | |
| 23 | BASE | DELETE | DELEAT | COMMAND | 1 | INPUT | |

FIG. 122

| | | | | | | | |
|---|---|---|---|---|---|---|---|
| 24 | | PROCESS END | ENDEND | COMMAND | 1 | INPUT | |
| 25 | BASE | REGISTER CONVERSION CODE | ENTCHNGCD | LETTERS | 10 | OUTPUT | |
| 26 | BASE | REGISTER COSTS CLASSIFICATION | ENTSRCECD | LETTERS | 12 | OUTPUT | |
| 27 | BASE | REGISTER PROCESS CLASSIFICATION | ENTPHSECD | LETTERS | 02 | OUTPUT | |
| 28 | BASE | REGISTER CONVERSION CLASSIFICATION | ENTCHNGAX | NUMERALS | 05 | OUTPUT | |
| 29 | BASE | REGISTER MANAGEMENT CLASSIFICATION | ENTMANGCD | LETTERS | 07 | OUTPUT | |
| 30 | BASE | REGISTER MANAGEMENT CLASSIFICATION NAME | ENTMANGNM | LETTERS | 25 | OUTPUT | |
| 31 | BASE | REGISTER MANUFACTURING COSTS COLLECTIVE STANDARD VALUE | ENTMKELVL | NUMERALS | 15 | OUTPUT | |
| 32 | BASE | SELECT LINE # | SELLINENO | NUMERALS | 2 | OUTPUT | 15 |
| 33 | BASE | APPLY LINE # | APLLINENO | NUMERALS | 2 | OUTPUT | 5 |

# FIG. 123

| ITEM# | KIND | NAME | IDENTIFIER | ATTRI-BUTE | ATTRI-BUTE | I/O | ORDI-NATION |
|---|---|---|---|---|---|---|---|
| 1 | BASE | FACTORY CODE | FACTD | LETTERS | 5 | INPUT | |
| 2 | BASE | CONFIRM | QURYCM | COMMAND | 1 | INPUT | |
| 3 | BASE | CONVERSION CODE | CHNGCD | LETTERS | 10 | OUTPUT | 15 |
| 4 | BASE | COSTS CLASSIFICATION | SRCECD | LETTERS | 12 | OUTPUT | 15 |
| 5 | BASE | PROCESS CLASSIFICATION | PHSECD | LETTERS | 02 | OUTPUT | 15 |
| 6 | BASE | CONVERSION CLASSIFICATION | CHNGAX | NUMERALS | 05 | OUTPUT | 15 |
| 7 | BASE | MANAGEMENT CLASSIFICATION | MANGCD | LETTERS | 07 | OUTPUT | 15 |
| 8 | BASE | MANAGEMENT CLASS. NAME | NANGNM | LETTERS | 25 | OUTPUT | 15 |
| 9 | BASE | MANUFACTURING COSTS CO-LLECTIVE STANDARD VALUE | MKELVL | NUMERALS | 15 | OUTPUT | 15 |
| 10 | BASE | SELECT OBJECT | SELOBJ | NUMERALS | 02 | INPUT | |
| 11 | BASE | SELECT | SELCCM | COMMAND | 1 | INPUT | |
| 12 | BASE | COMPANY GENERAL CONVERSION CODE | CNTCHNGCD | LETTERS | 10 | OUTPUT | 5 |
| 13 | BASE | COMPANY GENERAL COSTS CLASSIFICATION | CNTSRCECD | LETTERS | 12 | OUTPUT | 5 |
| 14 | BASE | COMPANY GENERAL PR-OCESS CLASSIFICATION | CNTPHSECD | LETTERS | 02 | OUTPUT | 5 |
| 15 | BASE | COMPANY GENERAL CON-VERSION CLASSIFICATION | CNTCHNGAX | NUMERALS | 05 | OUTPUT | 5 |
| 16 | BASE | COMPANY GENERAL MANA-GEMENT CLASSIFICATION | CNTMANGCD | LETTERS | 07 | OUTPUT | 5 |
| 17 | BASE | COMPANY GENERAL MANA-GEMENT CLASS. NAME | CNTMANGNM | LETTERS | 25 | OUTPUT | 5 |
| 18 | BASE | COMPANY GENERAL COSTS COLLECTIVE STANDARD VALUE | CNTMKELVL | NUMERALS | 15 | OUTPUT | 5 |
| 19 | BASE | APPLIED COMPANY GENE-RAL STANDARD VALUE | SELCMNLVL | NUMERALS | 01 | INPUT | |
| 20 | BASE | APPLY | SENCMN | COMMAND | 1 | INPUT | |
| 21 | BASE | REGISTER | ENTORY | COMMAND | 1 | INPUT | |
| 22 | BASE | CHANGE | CHANGE | COMMAND | 1 | INPUT | |
| 23 | BASE | DELETE | DELEAT | COMMAND | 1 | INPUT | |

# FIG. 124

| | | | | | | | |
|---|---|---|---|---|---|---|---|
| 24 | | PROCESS END | ENDEND | COMMAND | 1 | INPUT | |
| 25 | BASE | REGISTER CONVERSION CODE | ENTCHNGCD | LETTERS | 10 | OUTPUT | |
| 26 | BASE | REGISTER COSTS CLASSIFICATION | ENTSRCECD | LETTERS | 12 | OUTPUT | |
| 27 | BASE | REGISTER PROCESS CLASSIFICATION | ENTPHSECD | LETTERS | 02 | OUTPUT | |
| 28 | BASE | REGISTER CONVERSION CLASSIFICATION | ENTCHNGAX | NUMERALS | 05 | OUTPUT | |
| 29 | BASE | REGISTER MANAGEMENT CLASSIFICATION | ENTMANGCD | LETTERS | 07 | OUTPUT | |
| 30 | BASE | REGISTER MANAGEMENT CLASSIFICATION NAME | ENTMANGNM | LETTERS | 25 | OUTPUT | |
| 31 | BASE | REGISTER MANUFACTUR-ING COSTS COLLECTIVE STANDARD VALUE | ENTMKELVL | NUMERALS | 15 | OUTPUT | |
| 32 | BASE | SELECT LINE # | SELLINENO | NUMERALS | 2 | OUTPUT | 15 |
| 33 | BASE | APPLY LINE # | APLLINENO | NUMERALS | 2 | OUTPUT | 5 |
| 34 | ACTION | CONFIRM RESTART CHAIN OK | UGECG907_QURYCM_OKRT | | | | |
| 35 | ACTION | CONFIRM RESTART CHAIN NG | UGECG907_QURYCM_NGRT | | | | |
| 36 | ACTION | SELECT RESTART CHAIN OK | UGECG907_SELCM_OKRT | | | | |
| 37 | ACTION | SELECT RESTART CHAIN NG | UGECG907_SELCM_NGRT | | | | |
| 38 | ACTION | APPLY RESTART CHAIN OK | UGECG907_APLCM_OKRT | | | | |
| 39 | ACTION | APPLY RESTART CHAIN NG | UGECG907_APLCM_NGRT | | | | |
| 40 | ACTION | REGISTER RESTART CHAIN OK | UGECG907_ENTCM_OKRT | | | | |
| 41 | ACTION | REGISTER RESTART CHAIN NG | UGECG907_ENTCM_NGRT | | | | |
| 42 | ACTION | CONFIRM MESSAGE SEND | UGECG907_QURYCM_SEND | | | | |
| 43 | ACTION | CONFIRM MESSAGE RECEIVE | UGECG907_QURYCM_RECV | | | | |
| 44 | ACTION | REGISTER MESSAGE SEND | UGECG907_SELCM_SEND | | | | |
| 45 | ACTION | REGISTER MESSAGE RECEIVE | UGECG907_SELCM_RECV | | | | |
| 46 | ACTION | CHANGE MESSAGE SEND | UGECG907_APLCM_SEND | | | | |
| 47 | ACTION | CHANGE MESSAGE RECEIVE | UGECG907_APLCM_RECV | | | | |
| 48 | ACTION | DELETE MESSAGE SEND | UGECG907_ENTCM_SEND | | | | |
| 49 | ACTION | DELETE MESSAGE RECEIVE | UGECG907_ENTCM_RECV | | | | |

# FIG. 125

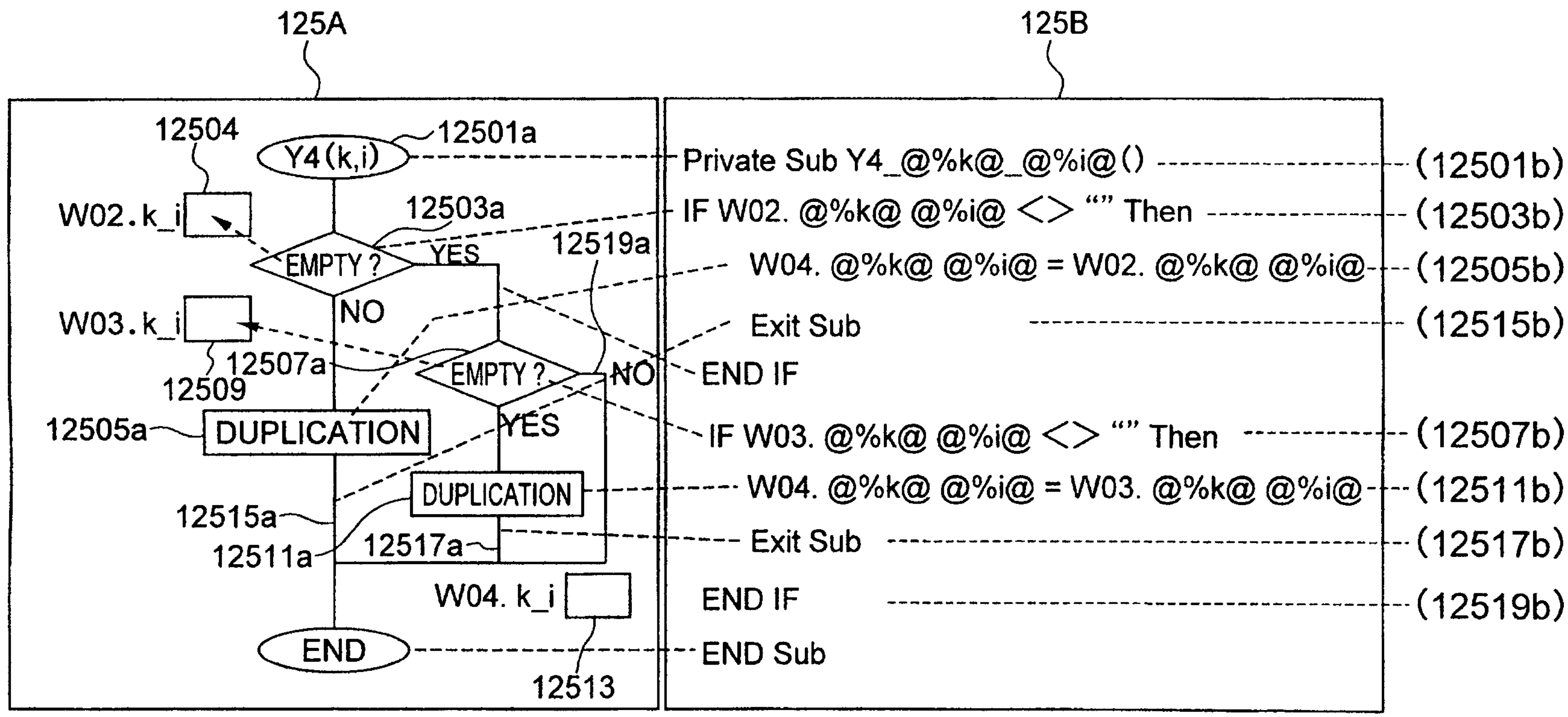
125A
125B
Y4(k,i)
12501a
12504
W02.k_i
12503a
EMPTY ?
YES
NO
W03.k_i
12509
12507a
EMPTY ?
NO
YES
12519a
12505a
DUPLICATION
DUPLICATION
12515a
12511a
12517a
W04. k_i
12513
END
Private Sub Y4_@%k@_@%i@() (12501b)
IF W02. @%k@ @%i@ <> "" Then (12503b)
W04. @%k@ @%i@ = W02. @%k@ @%i@ (12505b)
Exit Sub (12515b)
END IF
IF W03. @%k@ @%i@ <> "" Then (12507b)
W04. @%k@ @%i@ = W03. @%k@ @%i@ (12511b)
Exit Sub (12517b)
END IF (12519b)
END Sub

FIG. 126

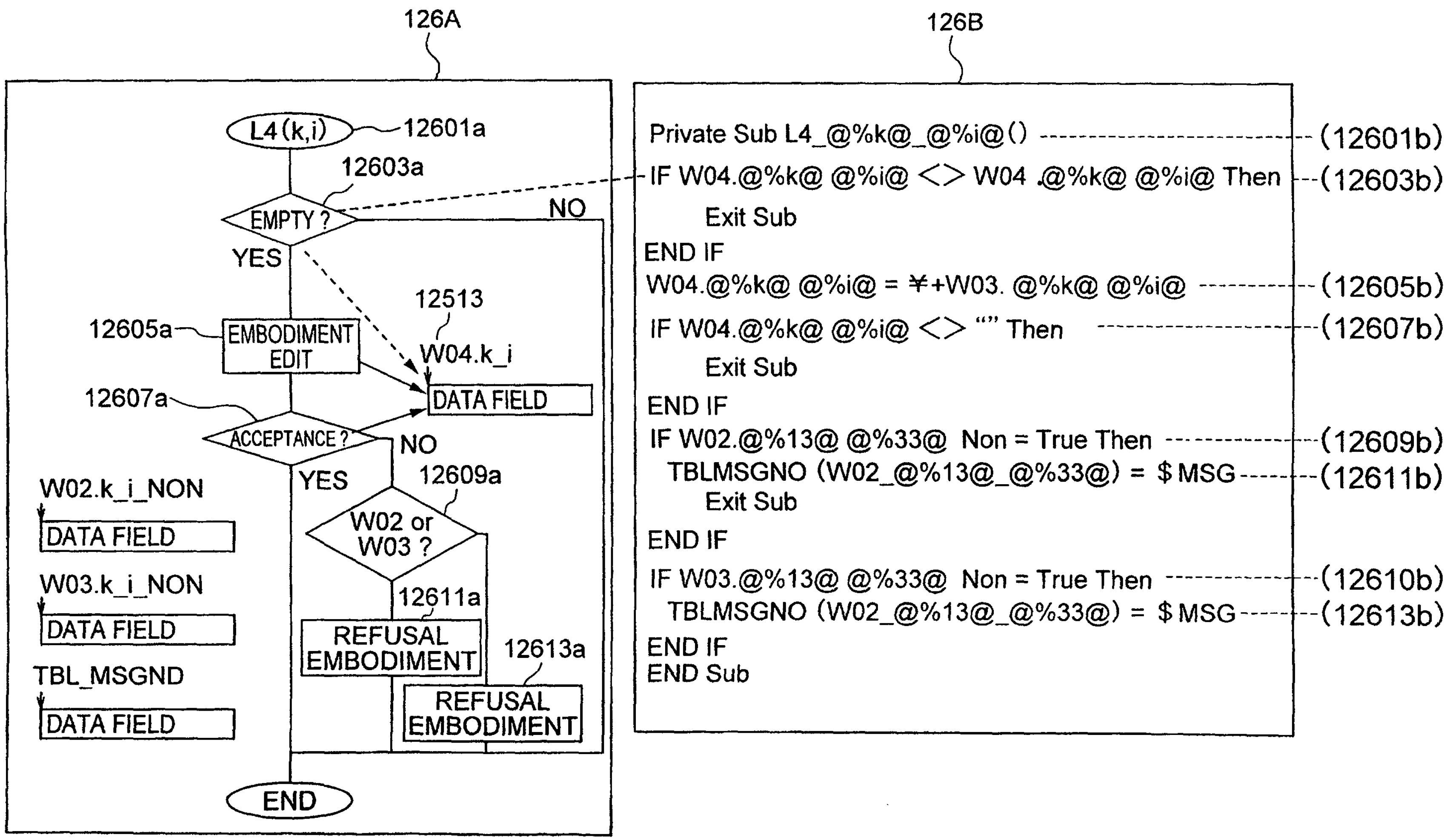
126A
126B
L4(k,i)
12601a
12603a
EMPTY ?
NO
YES
12513
W04.k_i
12605a
EMBODIMENT EDIT
DATA FIELD
12607a
ACCEPTANCE ?
NO
YES
12609a
W02 or W03 ?
12611a
REFUSAL EMBODIMENT
12613a
REFUSAL EMBODIMENT
END
W02.k_i_NON
DATA FIELD
W03.k_i_NON
DATA FIELD
TBL_MSGND
DATA FIELD
Private Sub L4_@%k@_@%i@() (12601b)
IF W04.@%k@ @%i@ <> W04 .@%k@ @%i@ Then (12603b)
Exit Sub
END IF
W04.@%k@ @%i@ = ¥+W03. @%k@ @%i@ (12605b)
IF W04.@%k@ @%i@ <> "" Then (12607b)
Exit Sub
END IF
IF W02.@%13@ @%33@ Non = True Then (12609b)
TBLMSGNO (W02_@%13@_@%33@) = $MSG (12611b)
Exit Sub
END IF
IF W03.@%13@ @%33@ Non = True Then (12610b)
TBLMSGNO (W02_@%13@_@%33@) = $MSG (12613b)
END IF
END Sub

# FIG. 127

127A

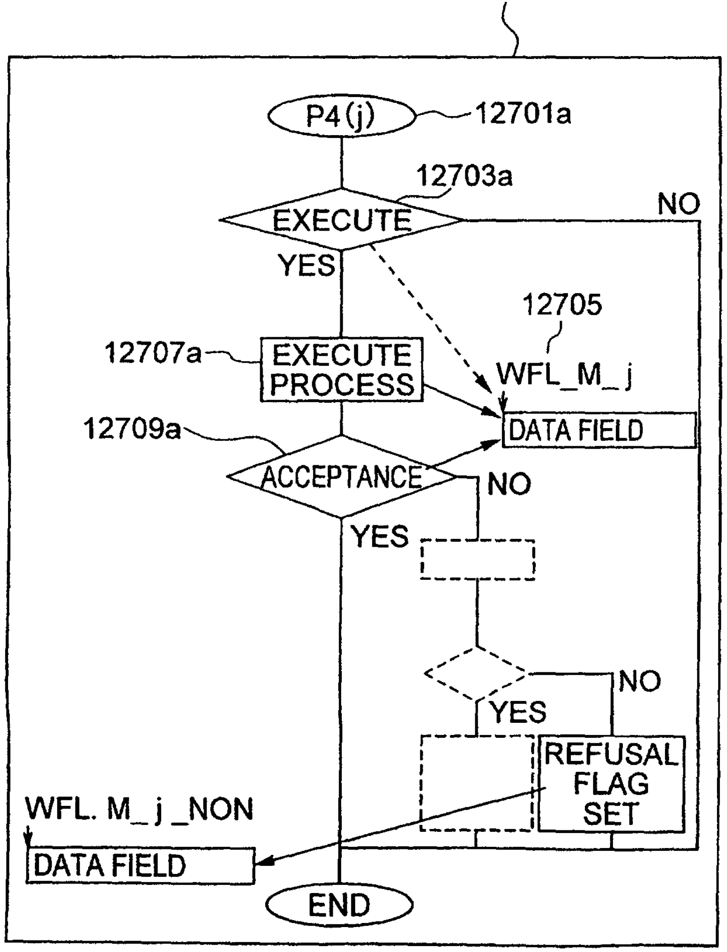


127B

```
Private Sub P4_@%M@_@j@()  ---------------------- (12701b)
NO IF WFL. @%M@_@%j@_FLG ◇ "" Then -------------- (12703b)
      Exit Sub
END IF
'EXECUTE PROCESS
WFL. @%M@_@%j@_FLG = "1" ------------------------ (12707b)
IF WFL. @%M@_@%j@_FLG = "1" Then ---------------- (12709b)
      Exit Sub
END IF
WFL. @%M@_@%j@_Non = True
END Sub
```

# FIG. 128

128A

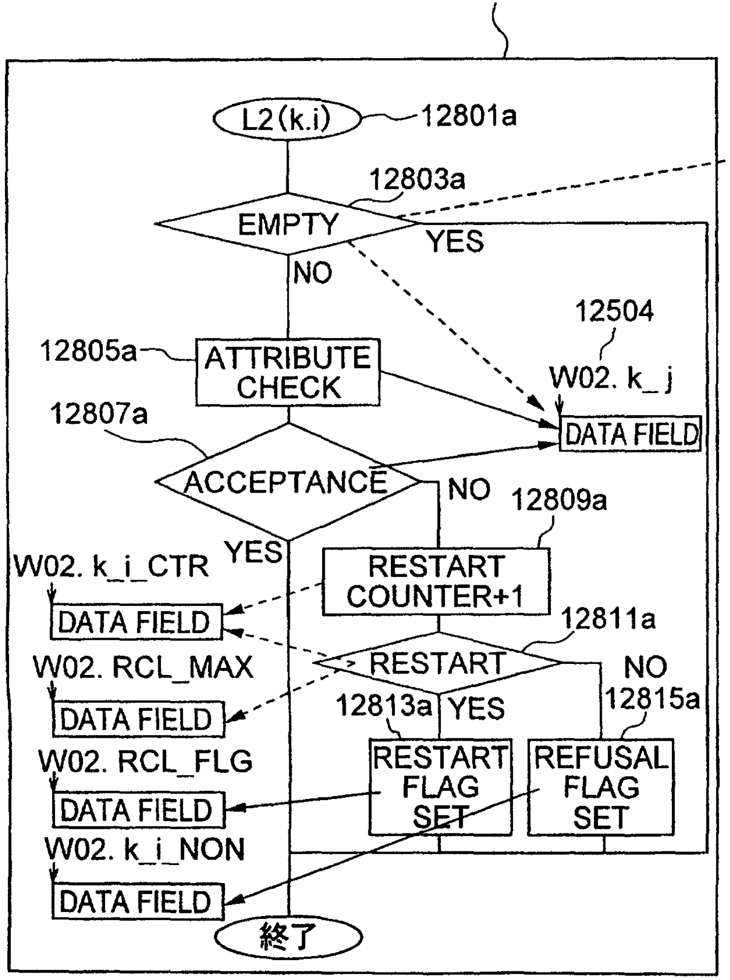


128B

```
Private Sub L2_@%k@_@%i@() ------------------------ (12801b)
IF W02. @%k@. @%i@ = "" Then ---------------------- (12803b)
    Exit Sub
END IF
IF IsMumeric (W02. @%k@. @%i@) = True Then -------- (12805b)
    Exit Sub
END IF
END IF
W02. @%k@. @%i@_CTR=W02. @%k@ @%i@_CTR+1 ---------- (12809b)
If W02. @%k@. @%i@_CTR < W02.RCL_MAX Then --------- (12811b)
  W02. RCL_FLG = True ----------------------------- (12813b)
    Exit Sub
END IF
If W02. @%k@. @%i@_CTR > W02.RCL_MAX Then --------- (12812b)
  W02. @%k@. @%i@_NON = True ---------------------- (12815b)
END IF
END Sub
```

FIG. 129

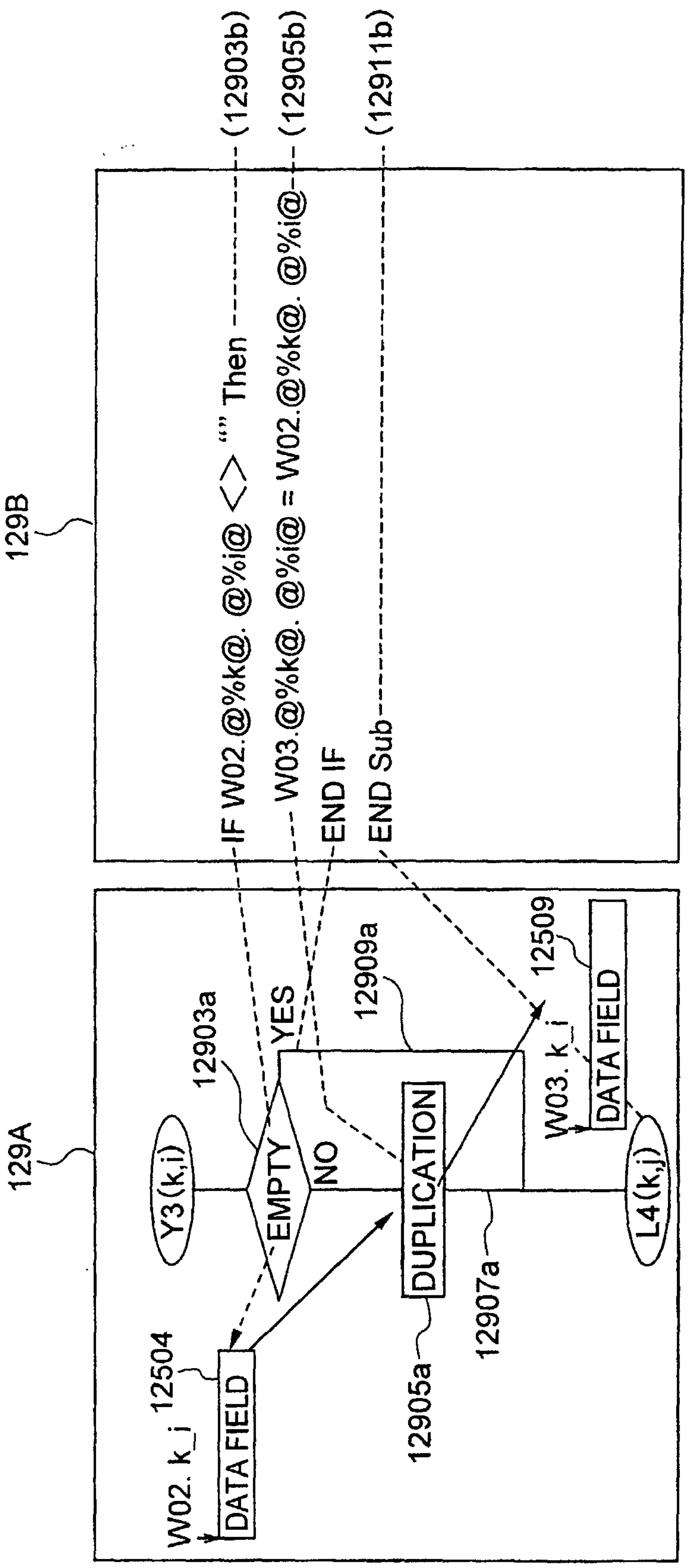
129A
129B
IF W02.@%k@. @%i@ <> "" Then
(12903b)
W03.@%k@. @%i@ = W02.@%k@. @%i@
(12905b)
END IF
END Sub
(12911b)
Y3(k,i)
EMPTY
YES
NO
12903a
12909a
DUPLICATION
12905a
12907a
W02. k_j
DATA FIELD
12504
W03. k_i
DATA FIELD
12509
L4(k,j)

# FIG. 130

130A

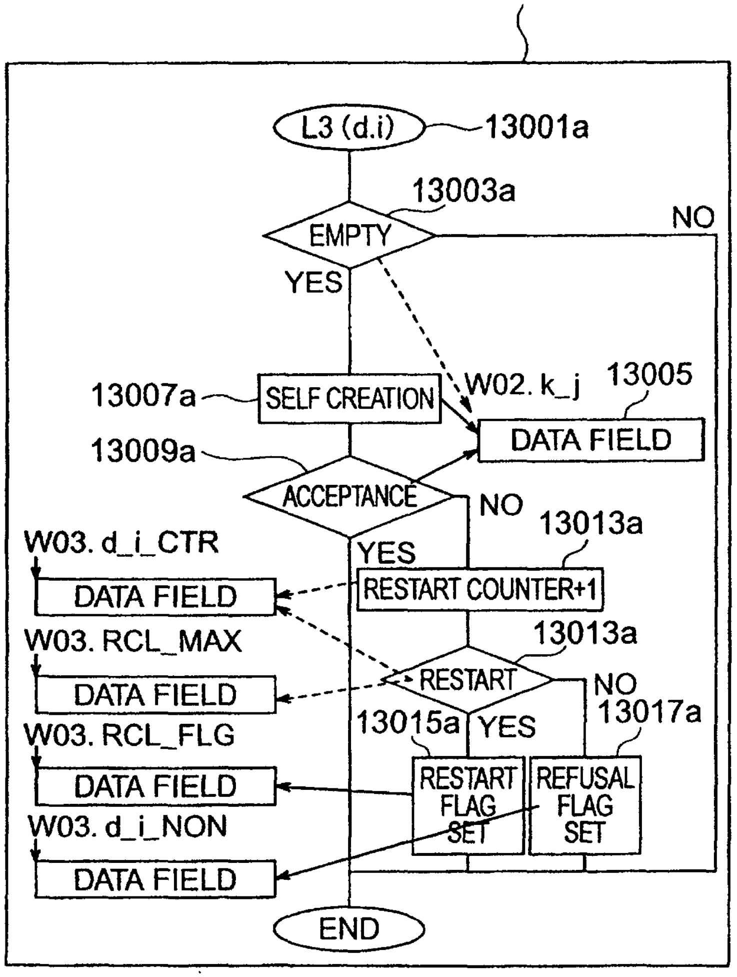


130B

```
Private Sub L3_@%d@_@%i@() ----------------------- (13001b)
IF W03. @%d@. @%i@) <> "" Then ------------------- (13003b)
     Exit Sub
END IF
W03 @%d@. @%i@  = W03 @%ds@. @%i@ --------------- (13007b)
IF W03. @%d@. @%i@) <> "" Then ------------------- (13009b)
     Exit Sub
END IF
W03. @%d@. @%i@_CTR=W03. @%d@ @%i@_CTR+1-- (13011b)
if W03. @%d@. @%i@_CTR < W03.RCL_MAX Then------ (13013b)
  W03. RCL_FLG=True --------------------------------- (13015b)
     Exit Sub
END IF
if W03. @%d@. @%i@_CTR > W03.RCL_MAX Then------ (13014b)
  W03. @%d@. @%i@_NON=True ---------------------- (13017b)
END IF
END Sub
```

# FIG. 131

131A

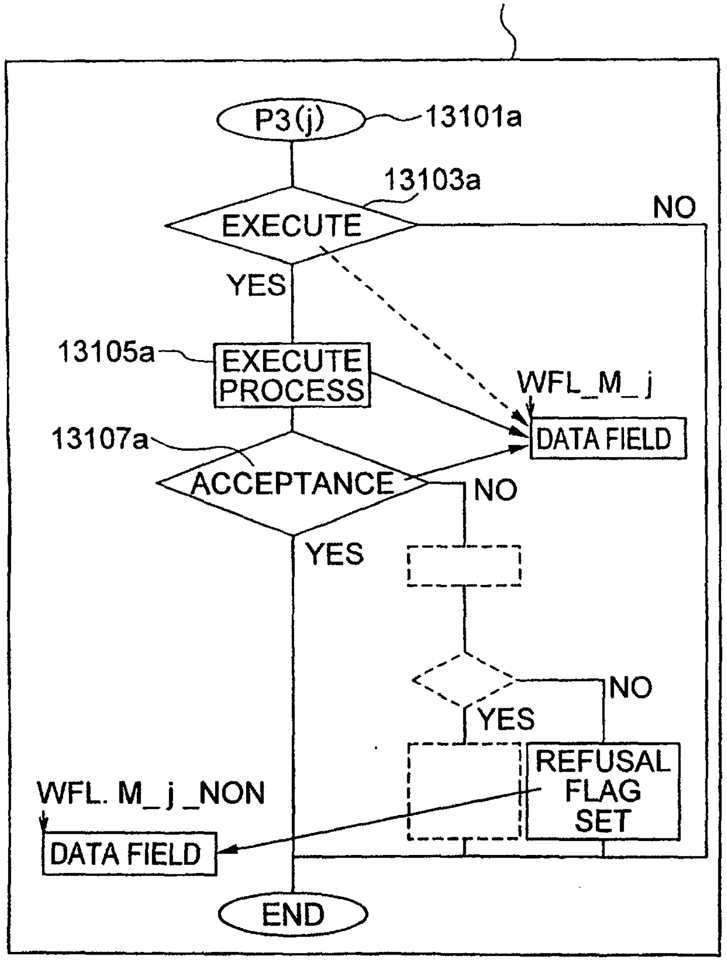


131B

```
Private Sub P3_@%M@_@j@()  ------------ (13101b)
NO IF WFL. @%M@_@%j@_FLG ◇ "" Then ---- (13103b)
    Exit Sub
END IF
'EXECUTE PROCESS
WFL. @%M@_@%j@_FLG = "1"
IF WFL. @%M@_@%j@_FLG = "1" Then
    Exit Sub
END IF
WFL. @%M@_@%j@_Non = True
END Sub
```

FIG. 132

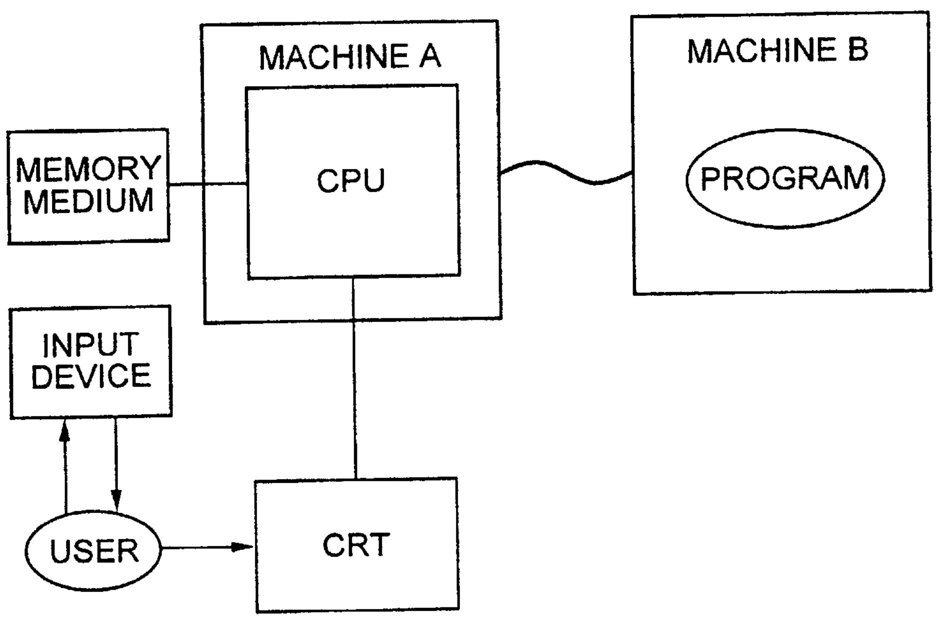
MACHINE A
CPU
MACHINE B
PROGRAM
MEMORY MEDIUM
INPUT DEVICE
USER
CRT

FIG. 133

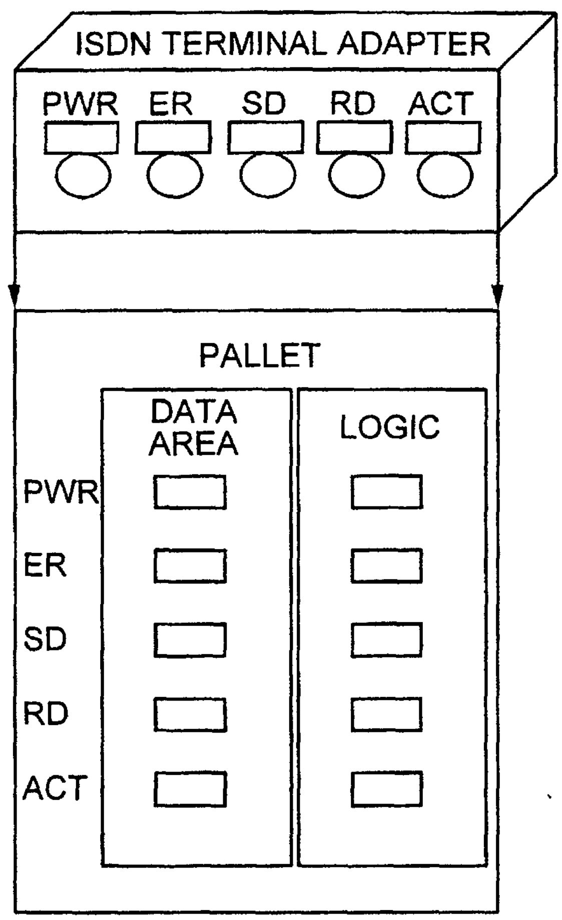
ISDN TERMINAL ADAPTER
PWR
ER
SD
RD
ACT
PALLET
DATA AREA
LOGIC
PWR
ER
SD
RD
ACT

FIG. 134

*To solve all troubles generated by traditional software.*

*Open Lyee-World !!*

# *LyeeALL*

THE INSTITUTE OF
COMPUTER BASED SOFTWARE METHODOLOGY AND TECHNOLOGY

FIG. 135

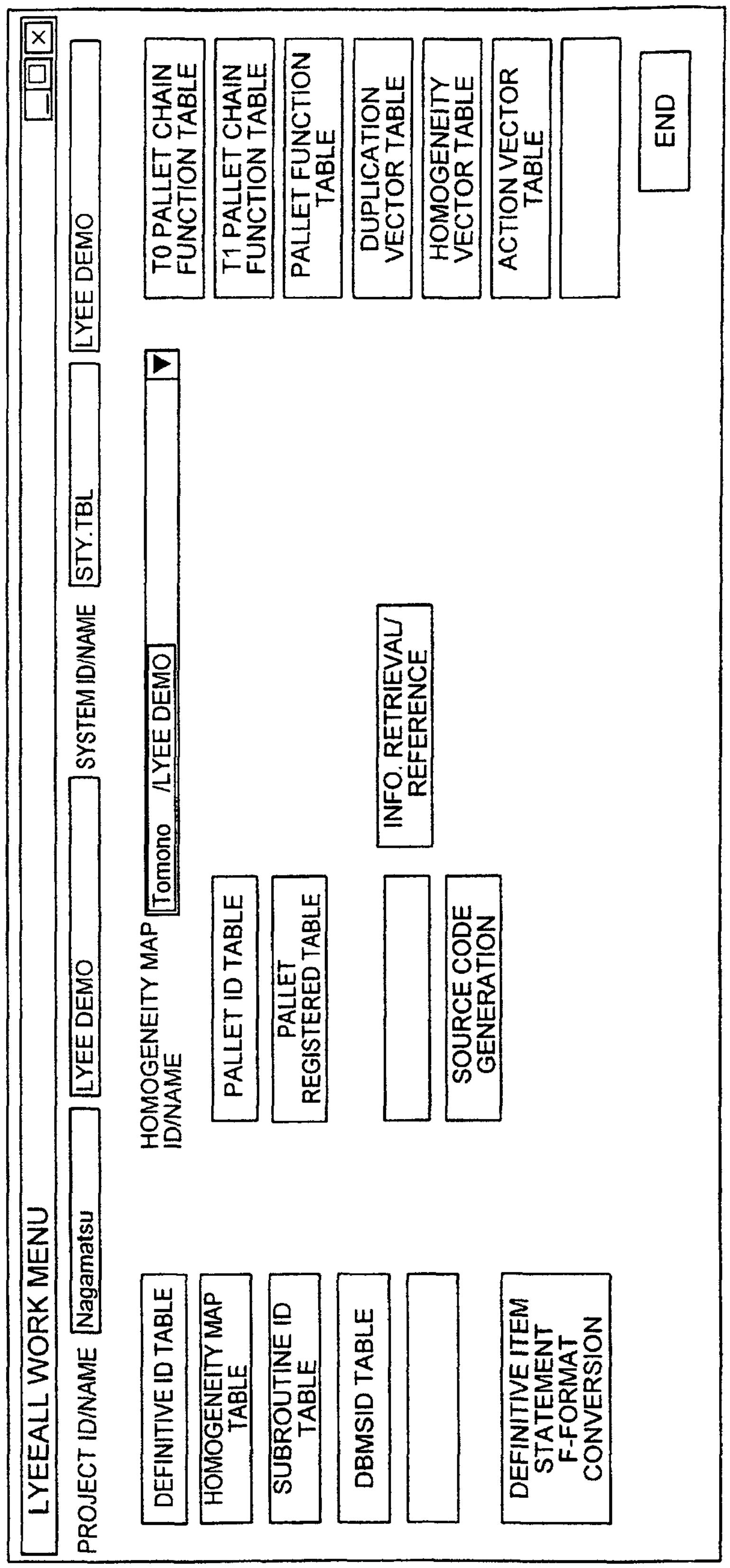
LYEEALL WORK MENU
PROJECT ID/NAME
Nagamatsu
LYEE DEMO
SYSTEM ID/NAME
STY.TBL
LYEE DEMO
HOMOGENEITY MAP ID/NAME
Tomono /LYEE DEMO
DEFINITIVE ID TABLE
HOMOGENEITY MAP TABLE
SUBROUTINE ID TABLE
DBMSID TABLE
DEFINITIVE ITEM STATEMENT F-FORMAT CONVERSION
PALLET ID TABLE
PALLET REGISTERED TABLE
SOURCE CODE GENERATION
INFO. RETRIEVAL/ REFERENCE
T0 PALLET CHAIN FUNCTION TABLE
T1 PALLET CHAIN FUNCTION TABLE
PALLET FUNCTION TABLE
DUPLICATION VECTOR TABLE
HOMOGENEITY VECTOR TABLE
ACTION VECTOR TABLE
END

# FIG. 136

DEFINITIVE ID TABLE

## DEFINITIVE ID TABLE

PROJECT ID/NAME Nagamatsu LYEE DEMO SYSTEM ID/NAME STY.TBL LYEE DEMO

| | DEFINITIVE ID | DEFINITIVE NAME | DEFINITIVE CLASS. | FILE COMPILE | ITEM Nos. |
|---|---|---|---|---|---|
| 1 | FKH210E | EMPLOYEE MASTER | 2 | | 7 |
| 2 | GMGMN | G'MORNING SCREEN | 1 | | 5 |
| 3 | NittiF | PER-DIEM FILE | 2 | | 17 |
| 4 | TKS10 | LYEE DEMO | 1 | | 21 |
| 5 | TKS52 | TRIP REQUEST (PURPOSE) | 1 | | 9 |
| 6 | PER-DIEM | PER-DIEM LOOKUP SCREEN | 1 | | 13 |

REGISTER SCREEN | CHANGE SCREEN | DELETE SCREEN | DETAILS TABLE DISPLAY | RETURN | EXTERNAL READ | DEFINITIVE DUPLICATE | END

FIG. 137

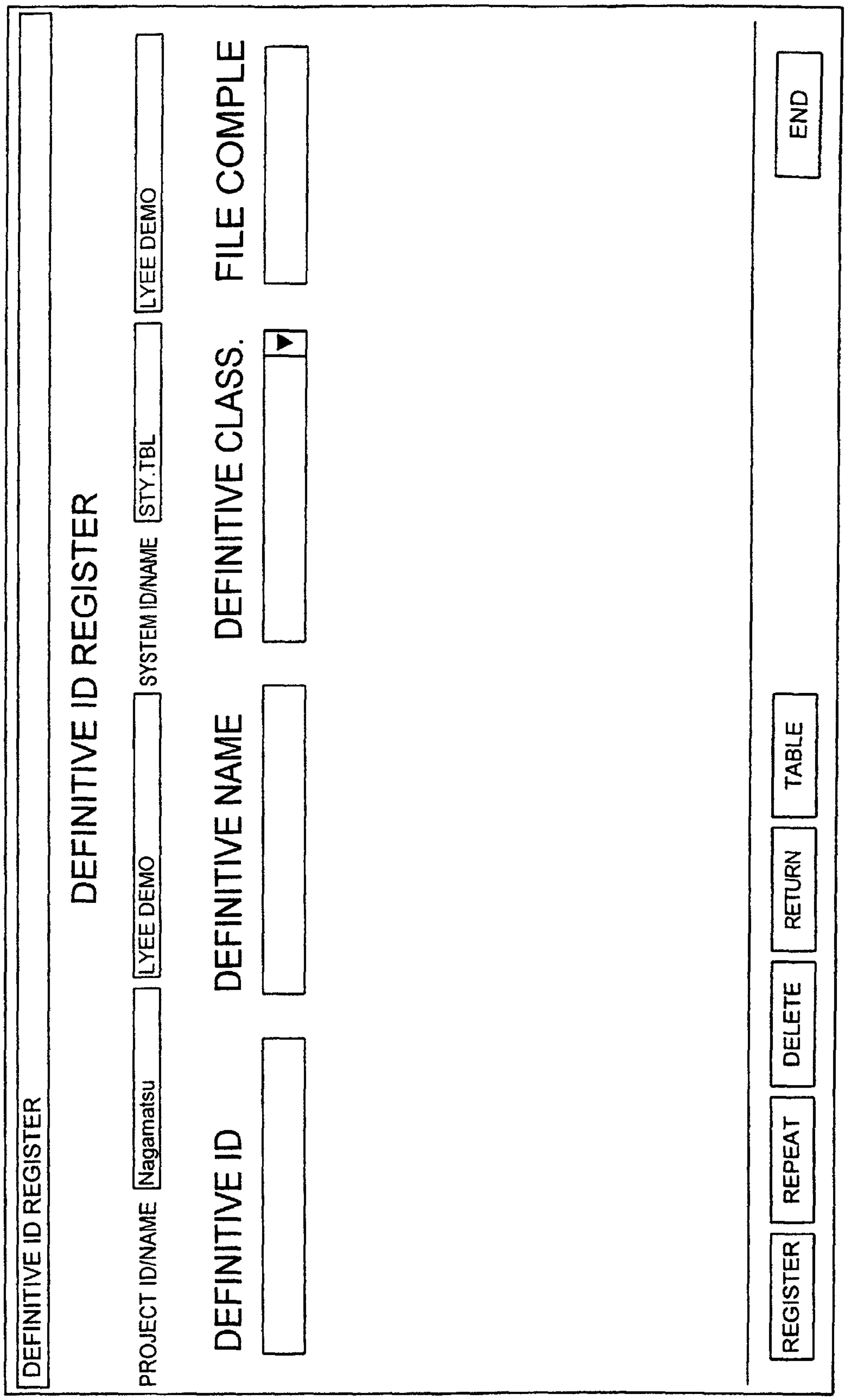
DEFINITIVE ID REGISTER
DEFINITIVE ID REGISTER
PROJECT ID/NAME
Nagamatsu
LYEE DEMO
SYSTEM ID/NAME
STY.TBL
LYEE DEMO
DEFINITIVE ID
DEFINITIVE NAME
DEFINITIVE CLASS.
FILE COMPLE
REGISTER
REPEAT
DELETE
RETURN
TABLE
END

# FIG. 138

DEFINITIVE DETAILS TABLE

## DEFINITIVE DETAILS TABLE

PROJECT ID/NAME: Nagamatsu | LYEE DEMO — SYSTEM ID/NAME: STY.TBL | LYEE DEMO

DEFINITIVE ID/NAME: FKH210E | EMPLOYEE MASTER

DEFINITIVE CLASS.: 2 — FILE COMPILE: — ITEM Nos.: 7

| | DEFINITIVE ID | ITEM ID | DEFINITIVE ID | ATTRIBUTE | NO. OF DIGITS | FLOATING POINT DIGIT | No.OF ORDINATION | I/O | EDIT |
|---|---|---|---|---|---|---|---|---|---|
| 1 | 1 | smycd | NAME CODE | 9 | 5 | | | 3 | |
| 2 | 2 | gender | GENDER | X | 10 | | | 3 | |
| 3 | 3 | busho | POSITION | X | 20 | | | 3 | |
| 4 | 4 | jusho | ADDRERSS | X | 20 | | | 3 | |
| 5 | 5 | tel | PHONE | X | 20 | | | 3 | |
| 6 | 6 | email | E-MAIL | X | 20 | | | 3 | |
| 7 | 7 | smy | NAME | X | 20 | | | 3 | |

REGISTER SCREEN | CHANGE SCREEN | DELETE SCREEN | RETURN | END

FIG. 139

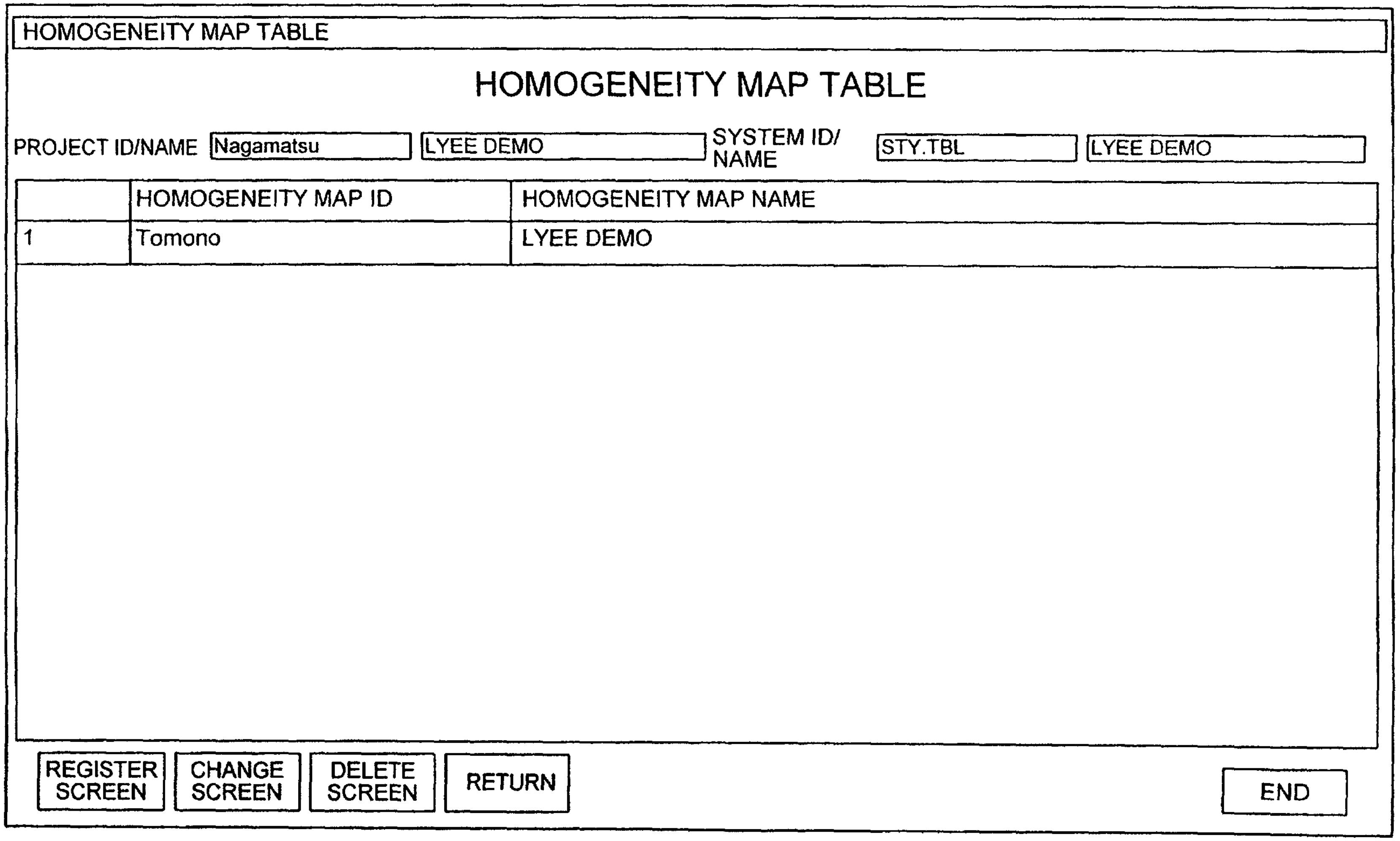
HOMOGENEITY MAP TABLE
HOMOGENEITY MAP TABLE
PROJECT ID/NAME
Nagamatsu
LYEE DEMO
SYSTEM ID/ NAME
STY.TBL
LYEE DEMO
HOMOGENEITY MAP ID
HOMOGENEITY MAP NAME
1
Tomono
LYEE DEMO
REGISTER SCREEN
CHANGE SCREEN
DELETE SCREEN
RETURN
END

FIG. 140

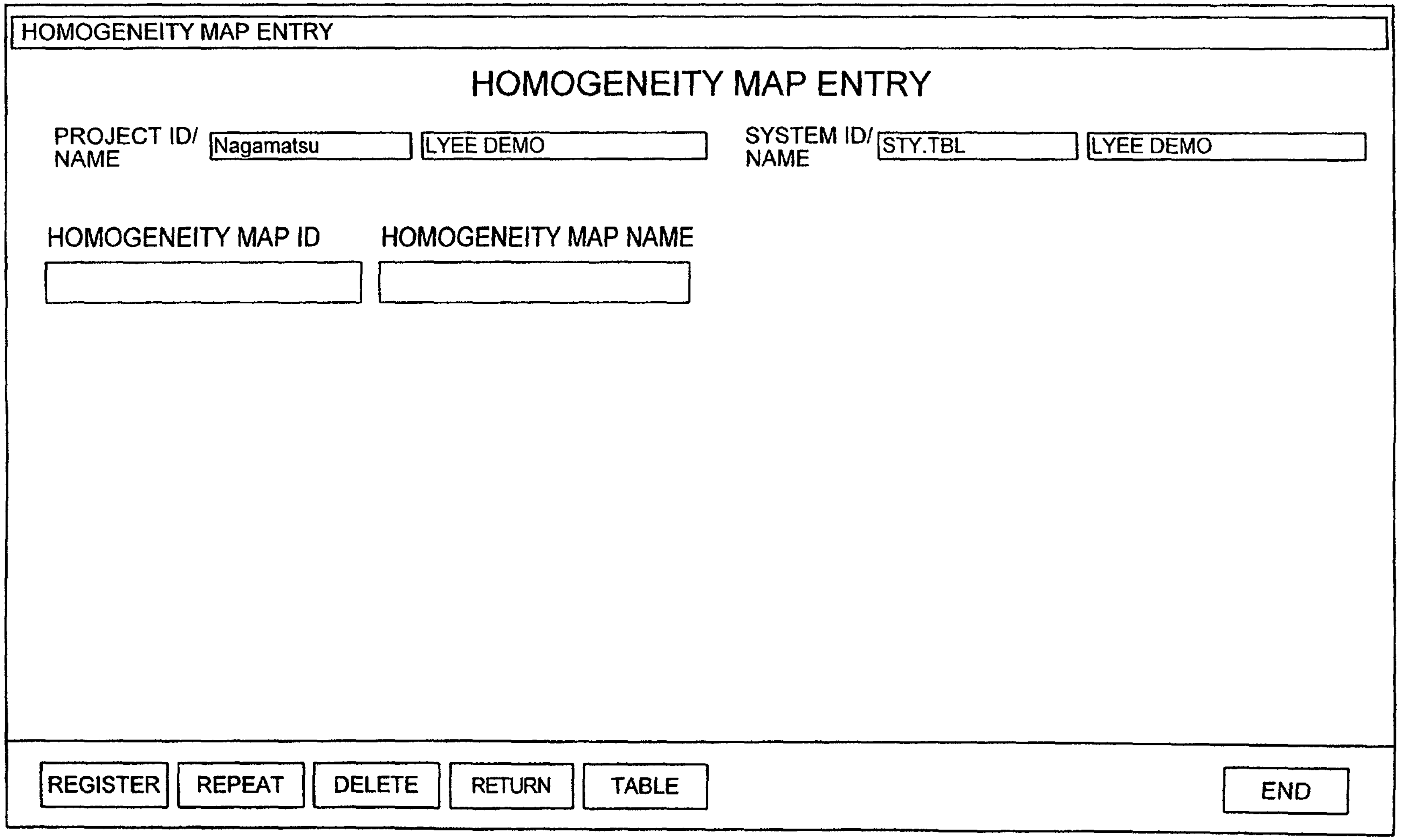
HOMOGENEITY MAP ENTRY
HOMOGENEITY MAP ENTRY
PROJECT ID/ NAME
Nagamatsu
LYEE DEMO
SYSTEM ID/ NAME
STY.TBL
LYEE DEMO
HOMOGENEITY MAP ID
HOMOGENEITY MAP NAME
REGISTER
REPEAT
DELETE
RETURN
TABLE
END

# FIG. 141

PALLET ID TABLE

## PALLET ID TABLE

PROJECT ID/NAME Nagamatsu LYEE DEMO SYSTEM ID/NAME STY.TBL LYEE DEMO

H.M.ID/NAME Tomono LYEE DEMO

| | T0/T1 | PALLET ID | PALLET NAME | PALEET CLASS. | PALEET KIND | PALLET FUNCTION ID | No. OF DEFINITIVES | WORD ID | No. OF WORDS |
|---|---|---|---|---|---|---|---|---|---|
| 1 | 0 | GMGNMW02 | G'MORNING SCREEN W02 | 2 | 1 | GMGNMW02 | 1 | GMGNMW02W | 1 |
| 2 | 0 | GMGMNW03 | G'MORNING SCREEN W03 | 3 | 1 | GMGMNW03 | 1 | GMGMNW03W | 1 |
| 3 | 0 | GMGMNW04 | G'MORNING SCREEN W04 | 4 | 1 | GMGMNW04 | 1 | GMGMNW04W | 1 |
| 4 | 0 | Mainbas | T0 MAIN | 0 | 2 | Mainbas | 6 | MainbasWT | 52 |
| 5 | 0 | TKS10W02 | EMPLOYEE MGMT. W02 | 2 | 1 | TKS10W02 | 1 | TKS10W02WT | 15 |
| 6 | 0 | TKS10W03 | EMPLOYEE MGMT. W03 | 3 | 1 | TKS10W03 | 3 | TKS10W03WT | 46 |
| 7 | 0 | TKS10W04 | EMPLOYEE MGMT. W04 | 4 | 1 | TKS10W04 | 1 | TKS10W04WT | 15 |
| 8 | 0 | TKS52W02 | TRIP REQUEST W02 | 2 | 1 | TKS52W02 | 1 | TKS52W02WT | 8 |
| 9 | 0 | TKS52W03 | TRIP REQUEST W03 | 3 | 1 | TKS52W03 | 1 | TKS52W03WT | 8 |
| 10 | 0 | TKS52W04 | TRIP REQUEST W04 | 4 | 1 | TKS52W04 | 1 | TKS52W04WT | 8 |
| 11 | 0 | PER-DIEM W02 | PER-DIEM TABLE SCRN W02 | 2 | 1 | PER-DIEM W02 | 1 | PER-DIEM W02WT | 11 |

REGISTER SCREEN | CHANGE SCREEN | DELETE SCREEN | RETURN | END

FIG. 142

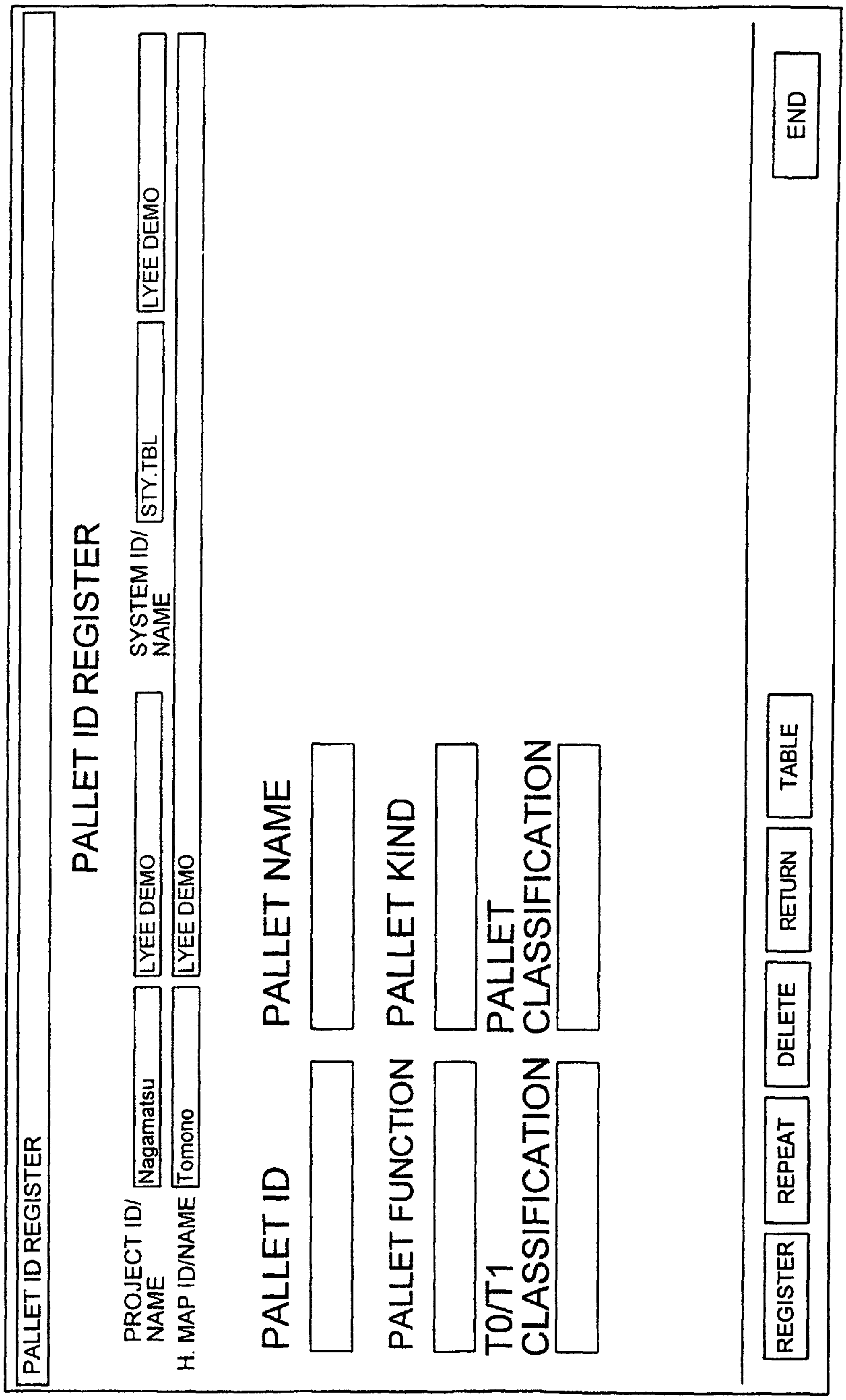
PALLET ID REGISTER
PALLET ID REGISTER
PROJECT ID/NAME
Nagamatsu
LYEE DEMO
SYSTEM ID/NAME
STY.TBL
LYEE DEMO
H. MAP ID/NAME
Tomono
LYEE DEMO
PALLET ID
PALLET NAME
PALLET FUNCTION
PALLET KIND
T0/T1 CLASSIFICATION
PALLET CLASSIFICATION
REGISTER
REPEAT
DELETE
RETURN
TABLE
END

# FIG. 143

PALLET REGISTERED TABLE

## PALLET REGISTERED TABLE

PROJECT ID/NAME: Nagamatsu | LYEE DEMO — SYSTEM ID/NAME: STY.TBL | LYEE DEMO

H.MAP ID/NAME: Tomono | LYEE DEMO

| | T0/T1 | PALLET ID | PALLET NAME | PALEET CLASS. | PALEET KIND | PALLET FUNCTION ID | WORD ID | No. OF DEFINITIVES | No. OF WORD |
|---|---|---|---|---|---|---|---|---|---|
| 1 | 0 | GMGNMW02 | G'MORNING SCREEN W02 | 2 | 1 | GMGNMW02 | GMGNMW02WT | 1 | 1 |
| 2 | 0 | GMGMNW03 | G'MORNING SCREEN W03 | 3 | 1 | GMGMNW03 | GMGNMW03WT | 1 | 1 |
| 3 | 0 | GMGMNW04 | G'MORNING SCREEN W04 | 4 | 1 | GMGMNW04 | GMGNMW04WT | 1 | 1 |
| 4 | 0 | Mainbas | T0 MAIN | 0 | 2 | Mainbas | MainbasWT | 6 | 52 |
| 5 | 0 | TKS10W02 | EMPLOYEE MGMT. W02 | 2 | 1 | TKS10W02 | TKS10W02WT | 1 | 15 |
| 6 | 0 | TKS10W03 | EMPLOYEE MGMT. W03 | 3 | 1 | TKS10W03 | TKS10W03WT | 3 | 46 |
| 7 | 0 | TKS10W04 | EMPLOYEE MGMT. W04 | 4 | 1 | TKS10W04 | TKS10W04WT | 1 | 15 |
| 8 | 0 | TKS52W02 | TRIP REQUEST W02 | 2 | 1 | TKS52W02 | TKS52W02WT | 1 | 8 |
| 9 | 0 | TKS52W03 | TRIP REQUEST W03 | 3 | 1 | TKS52W03 | TKS52W03WT | 1 | 8 |
| 10 | 0 | TKS52W04 | TRIP REQUEST W04 | 4 | 1 | TKS52W04 | TKS52W04WT | 1 | 8 |
| 11 | 0 | PER-DIEM W02 | PER-DIEM TABLE SCRN W02 | 2 | 1 | PER-DIEM W02 | PER-DIEM W02WT | 1 | 11 |

CHANGE SCREEN | DELETE SCREEN | RETURN | END

FIG. 144

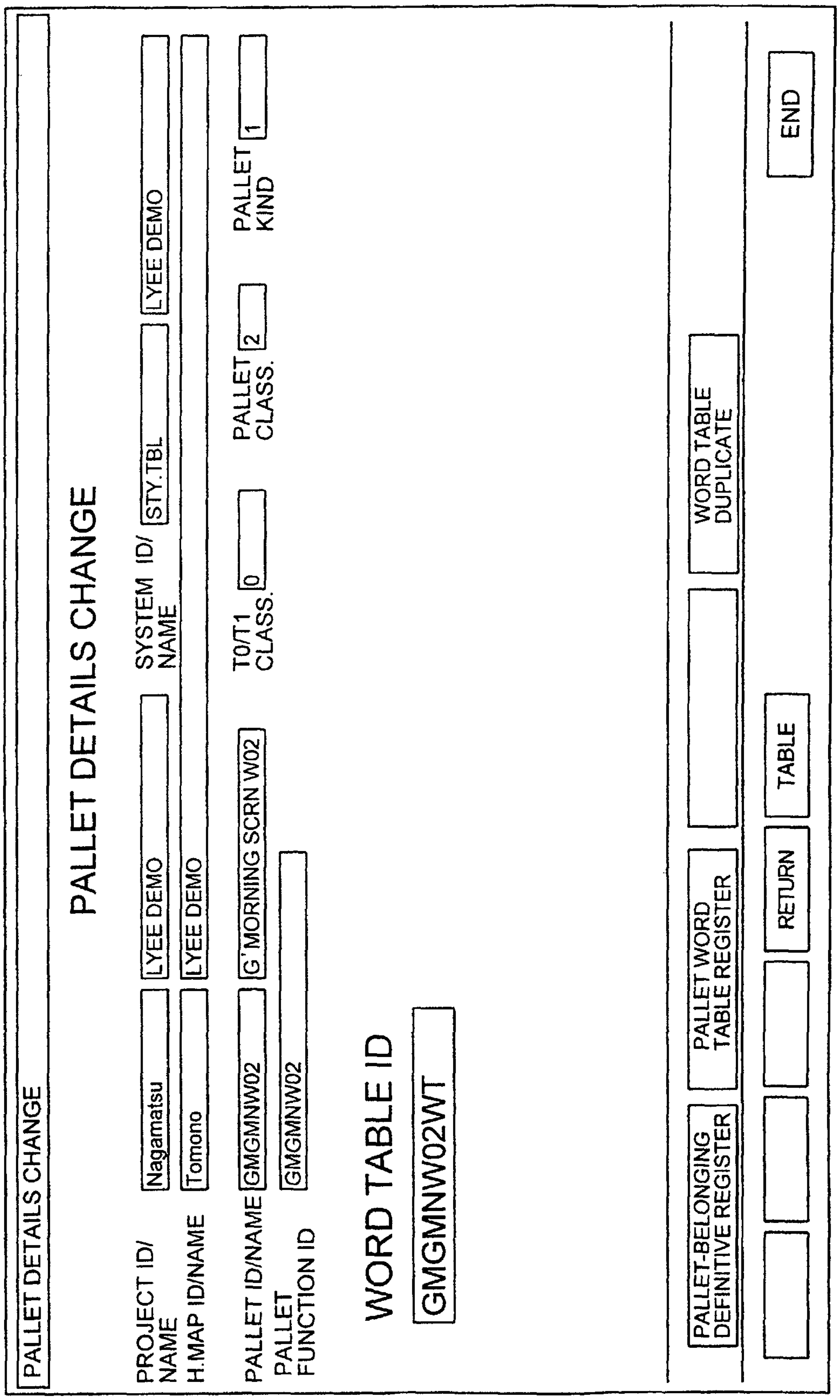
PALLET DETAILS CHANGE
PALLET DETAILS CHANGE
PROJECT ID/ NAME
Nagamatsu
LYEE DEMO
SYSTEM ID/ NAME
STY.TBL
LYEE DEMO
H.MAP ID/NAME
Tomono
LYEE DEMO
PALLET ID/NAME
GMGMNW02
G'MORNING SCRN W02
T0/T1 CLASS.
0
PALLET CLASS.
2
PALLET KIND
1
PALLET FUNCTION ID
GMGMNW02
WORD TABLE ID
GMGMNW02WT
PALLET-BELONGING DEFINITIVE REGISTER
PALLET WORD TABLE REGISTER
WORD TABLE DUPLICATE
RETURN
TABLE
END

FIG. 145

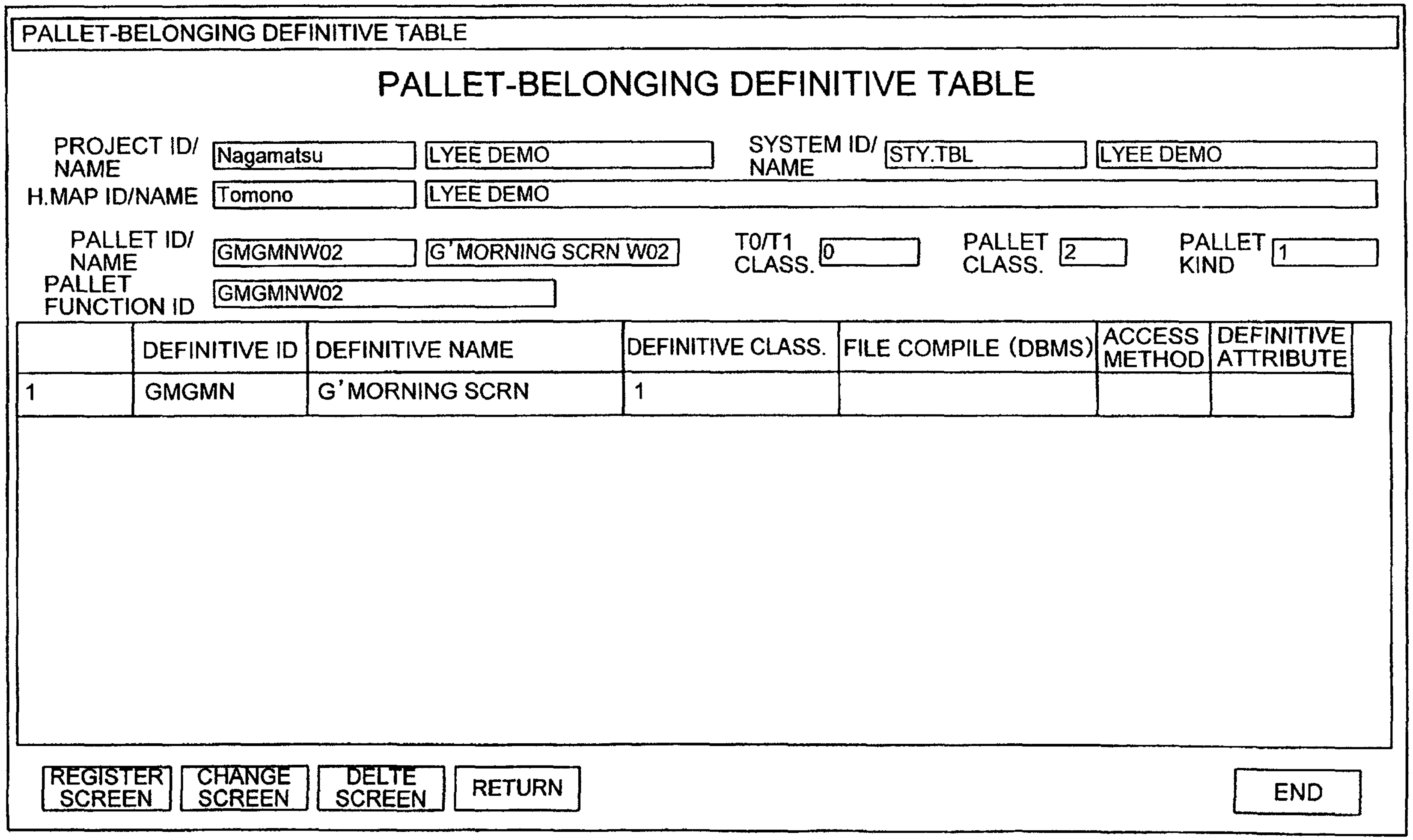
PALLET-BELONGING DEFINITIVE TABLE
PALLET-BELONGING DEFINITIVE TABLE
PROJECT ID/ NAME
Nagamatsu
LYEE DEMO
SYSTEM ID/ NAME
STY.TBL
LYEE DEMO
H.MAP ID/NAME
Tomono
LYEE DEMO
PALLET ID/ NAME
GMGMNW02
G'MORNING SCRN W02
T0/T1 CLASS.
0
PALLET CLASS.
2
PALLET KIND
1
PALLET FUNCTION ID
GMGMNW02
DEFINITIVE ID
DEFINITIVE NAME
DEFINITIVE CLASS.
FILE COMPILE (DBMS)
ACCESS METHOD
DEFINITIVE ATTRIBUTE
1
GMGMN
G'MORNING SCRN
1
REGISTER SCREEN
CHANGE SCREEN
DELTE SCREEN
RETURN
END

FIG. 146

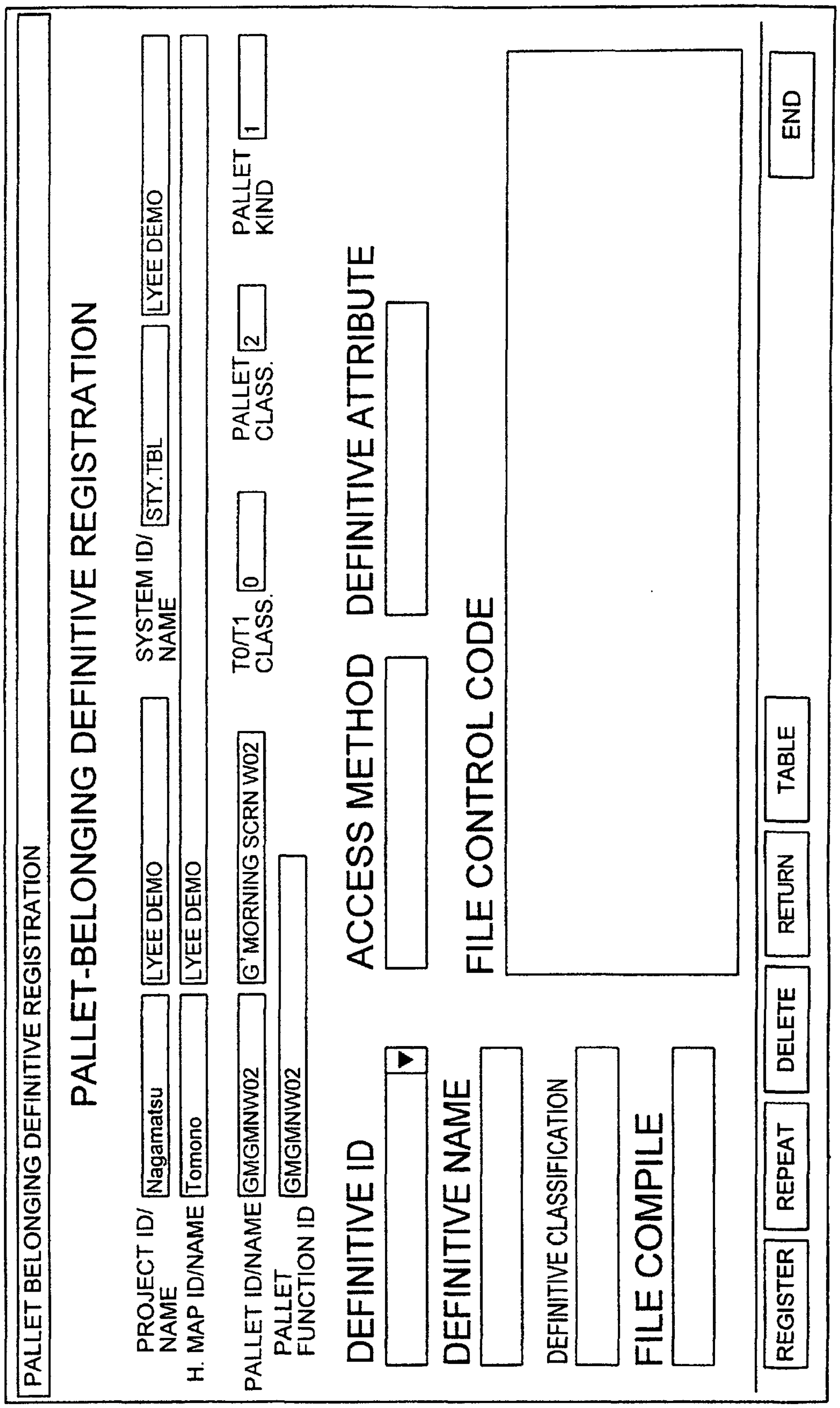

PALLET BELONGING DEFINITIVE REGISTRATION
PALLET-BELONGING DEFINITIVE REGISTRATION
PROJECT ID/NAME
Nagamatsu
LYEE DEMO
SYSTEM ID/NAME
STY.TBL
LYEE DEMO
H. MAP ID/NAME
Tomono
LYEE DEMO
PALLET ID/NAME
GMGMNW02
G'MORNING SCRN W02
T0/T1 CLASS.
0
PALLET CLASS.
2
PALLET KIND
1
PALLET FUNCTION ID
GMGMNW02
DEFINITIVE ID
ACCESS METHOD
DEFINITIVE ATTRIBUTE
DEFINITIVE NAME
FILE CONTROL CODE
DEFINITIVE CLASSIFICATION
FILE COMPILE
REGISTER
REPEAT
DELETE
RETURN
TABLE
END

# FIG. 147

PALLET-BELONGING DEFINITIVE REGISTRATION

## PALLET BELONGING DEFINITIVE REGISTRATION

PROJECT ID/ NAME: Nagamatsu | LYEE DEMO
SYSTEM ID/ NAME: STY.TBL | LYEE DEMO
H, MAP ID/NAME: Tomono | LYEE DEMO

PALLET ID/ NAME: GMGMNW02 | G' MORNING SCRN W02
T0/T1 CLASS.: 0
PALLET CLASS.: 2
PALLET KIND: 1
PALLET FUNCTION ID: GMGMNW02
WORD TABLE ID: GMGMNW02WT

| | SEQ# | WORD/ACTION OPERATION CLASS. | WTid | DEFINITIVE ID | DEFINITIVE ID | WORD NAME | WORD KIND | AREA |
|---|---|---|---|---|---|---|---|---|
| 1 | 1 | L | | GMGMN | strtbtn | START BUTTON | 1 | str |
| 2 | 2 | L | | GMGMN | ENTBTN | EXECUTE BUTTON | 1 | EN |
| 3 | 3 | L | | GMGMN | abcd | ABCD | 1 | abc |
| 4 | 4 | L | | GMGMN | CLEAR | CLEAR | 1 | CL |
| 5 | 5 | L | | GMGMN | RNK | RANK | 1 | RN |

PALLET WORD TABLE CONTENTS | PALLET AREA SOURCE

REGISTER | REPEAT | DELETE | RETURN | END

FIG. 148

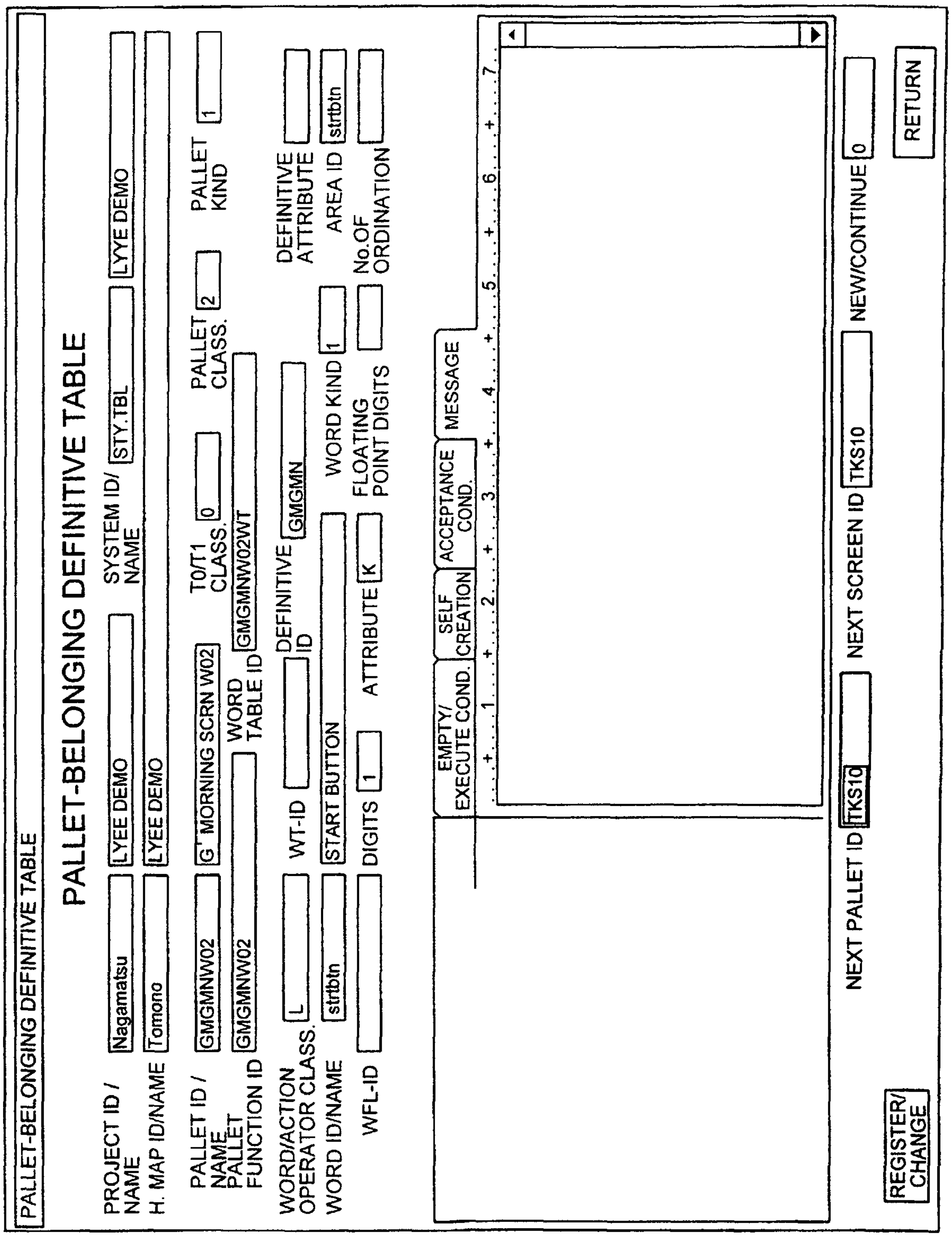
PALLET-BELONGING DEFINITIVE TABLE
PALLET-BELONGING DEFINITIVE TABLE
PROJECT ID / NAME
Nagamatsu
LYEE DEMO
SYSTEM ID/ NAME
STY.TBL
LYYE DEMO
H. MAP ID/NAME
Tomono
LYEE DEMO
PALLET ID / NAME
GMGMNW02
G' MORNING SCRN W02
T0/T1 CLASS.
0
PALLET CLASS.
2
PALLET KIND
1
PALLET FUNCTION ID
GMGMNW02
WORD TABLE ID
GMGMNW02WT
WORD/ACTION OPERATOR CLASS.
L
WT-ID
DEFINITIVE ID
GMGMN
DEFINITIVE ATTRIBUTE
WORD ID/NAME
strtbtn
START BUTTON
WORD KIND
1
AREA ID
strtbtn
WFL-ID
DIGITS
1
ATTRIBUTE
K
FLOATING POINT DIGITS
No.OF ORDINATION
EMPTY/ EXECUTE COND.
SELF CREATION
ACCEPTANCE COND.
MESSAGE
NEXT PALLET ID
TKS10
NEXT SCREEN ID
TKS10
NEW/CONTINUE
0
REGISTER/ CHANGE
RETURN

# FIG. 149

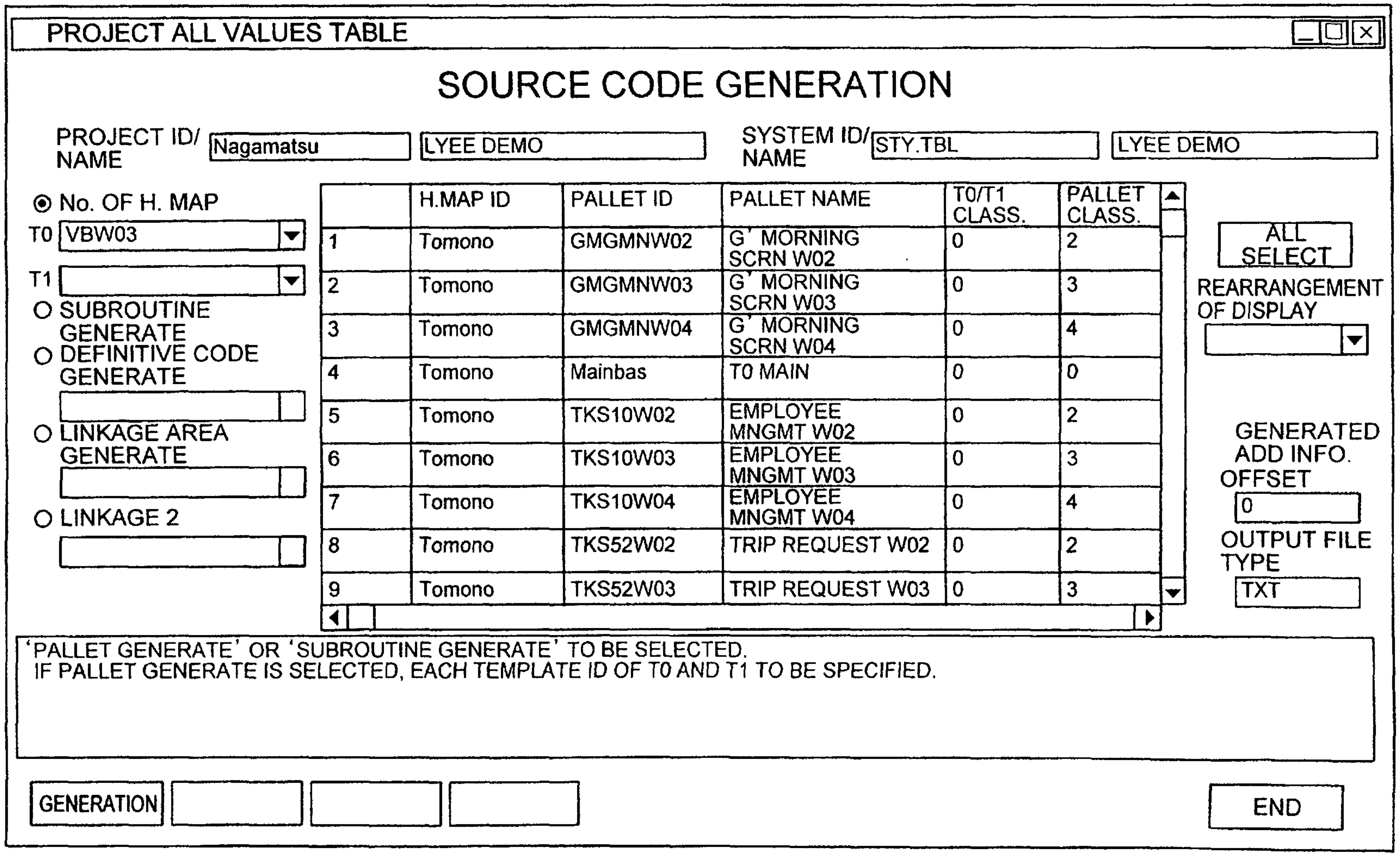
PROJECT ALL VALUES TABLE
SOURCE CODE GENERATION
PROJECT ID/ NAME
Nagamatsu
LYEE DEMO
SYSTEM ID/ NAME
STY.TBL
LYEE DEMO
No. OF H. MAP
T0
VBW03
T1
SUBROUTINE GENERATE
DEFINITIVE CODE GENERATE
LINKAGE AREA GENERATE
LINKAGE 2
H.MAP ID
PALLET ID
PALLET NAME
T0/T1 CLASS.
PALLET CLASS.
1
Tomono
GMGMNW02
G' MORNING SCRN W02
0
2
2
Tomono
GMGMNW03
G' MORNING SCRN W03
0
3
3
Tomono
GMGMNW04
G' MORNING SCRN W04
0
4
4
Tomono
Mainbas
T0 MAIN
0
0
5
Tomono
TKS10W02
EMPLOYEE MNGMT W02
0
2
6
Tomono
TKS10W03
EMPLOYEE MNGMT W03
0
3
7
Tomono
TKS10W04
EMPLOYEE MNGMT W04
0
4
8
Tomono
TKS52W02
TRIP REQUEST W02
0
2
9
Tomono
TKS52W03
TRIP REQUEST W03
0
3
ALL SELECT
REARRANGEMENT OF DISPLAY
GENERATED ADD INFO. OFFSET
0
OUTPUT FILE TYPE
TXT
'PALLET GENERATE' OR 'SUBROUTINE GENERATE' TO BE SELECTED.
IF PALLET GENERATE IS SELECTED, EACH TEMPLATE ID OF T0 AND T1 TO BE SPECIFIED.
GENERATION
END

FIG. 150

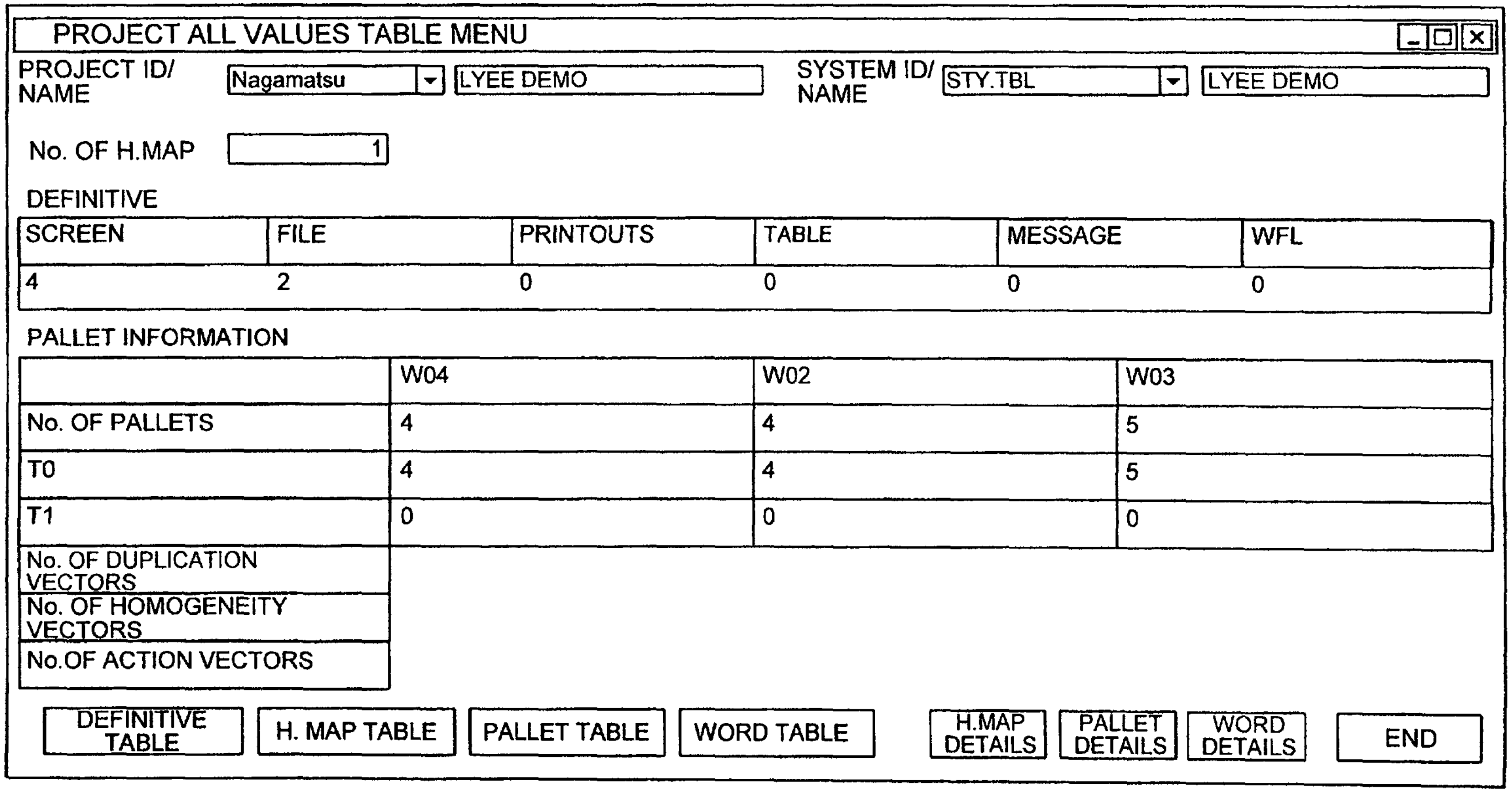
PROJECT ALL VALUES TABLE MENU
PROJECT ID/ NAME
Nagamatsu
LYEE DEMO
SYSTEM ID/ NAME
STY.TBL
LYEE DEMO
No. OF H.MAP
1
DEFINITIVE
SCREEN
FILE
PRINTOUTS
TABLE
MESSAGE
WFL
4
2
0
0
0
0
PALLET INFORMATION
W04
W02
W03
No. OF PALLETS
4
4
5
T0
4
4
5
T1
0
0
0
No. OF DUPLICATION VECTORS
No. OF HOMOGENEITY VECTORS
No.OF ACTION VECTORS
DEFINITIVE TABLE
H. MAP TABLE
PALLET TABLE
WORD TABLE
H.MAP DETAILS
PALLET DETAILS
WORD DETAILS
END

# FIG. 151

WORD DETAILS TABLE

PROJECT ID/NAME: Nagamatsu | LYEE DEMO
SYSTEM ID/NAME: STY.TBL | LYEE DEMO

H. MAP ID/NAME: Tomono | LYEE DEMO
No. OF PALLET: 13

PALLET ID/NAME: TKS10W03 | EMPLOYEE MNGMT. W03
WORD ID: TKS10W03WT
No. OF WORDS: 46

| SEQ# | W/A CLASS | WT-ID | DEFINITIVE ID | W. ID | W. NAME | W. KIND | EMP | SELF CR. | ACC. | M | AREA ID | WFL-ID |
|---|---|---|---|---|---|---|---|---|---|---|---|---|
| 16 | L | | TKS10 | lyeecm | LYEE'S CM COLUMN | 1 | | | | | lyeecm | |
| 17 | L | | TKS10 | nxtscn | TRIP REQUEST | 1 | | | | | nxtscn | |
| 21 | L | | FKH210E | smycdw | NAME CODE W | 2 | | | | | smycd | |
| 22 | L | | FKH210E | smyw | NAME W | 2 | | | | | smyw | |
| 23 | L | | FKH210E | genderw | GENDER W | 2 | | | | | gender | |
| 24 | L | | FKH210E | bushow | DEPT. W | 2 | | | | | busho | |
| 25 | L | | FKH210E | telw | PHONE | 2 | | | | | tel | |
| 27 | L | | FKH210E | emailw | EMAIL | 2 | | | | | email | |
| 26 | L | | FKH210E | jushow | ADDRESS | 2 | | | | | jusho | |
| 18 | L | | TKS10 | XYZ | 4-CHRS. DISPLAY | 1 | | | | | XYZ | |
| 20 | L | | TKS10 | HRY | HARUYO | 1 | | | | | HRY | |
| 2 | L | | TKS10 | JKKBTN | EXECUTE BUTTON | 1 | | | | | JKKBTN | |
| 3 | L | | TKS10 | SYRYBTN | END BUTTON | 1 | | | | | SYRYBTN | |
| 1 | L | | TKS10 | TBLCD | PROCESS DIRECTION | 1 | | | | | TBLCD | |
| 5 | L | | TKS10 | tanka | UNIT COST | 1 | | | | | tanka | |
| 6 | L | | TKS10 | suryo | QTY. | 1 | | | | | suryo | |
| 7 | L | | TKS10 | kingaku | AMOUNT | 1 | | | | | kingaku | |
| 4 | L | | TKS10 | tawrda | NAME | 1 | | | | | tawrda | |
| 10 | L | | TKS10 | cmntl | REMARKS | 1 | | | | | cmntl | |

PRINT | TEXT OUTPUT | RETURN

FIG. 152

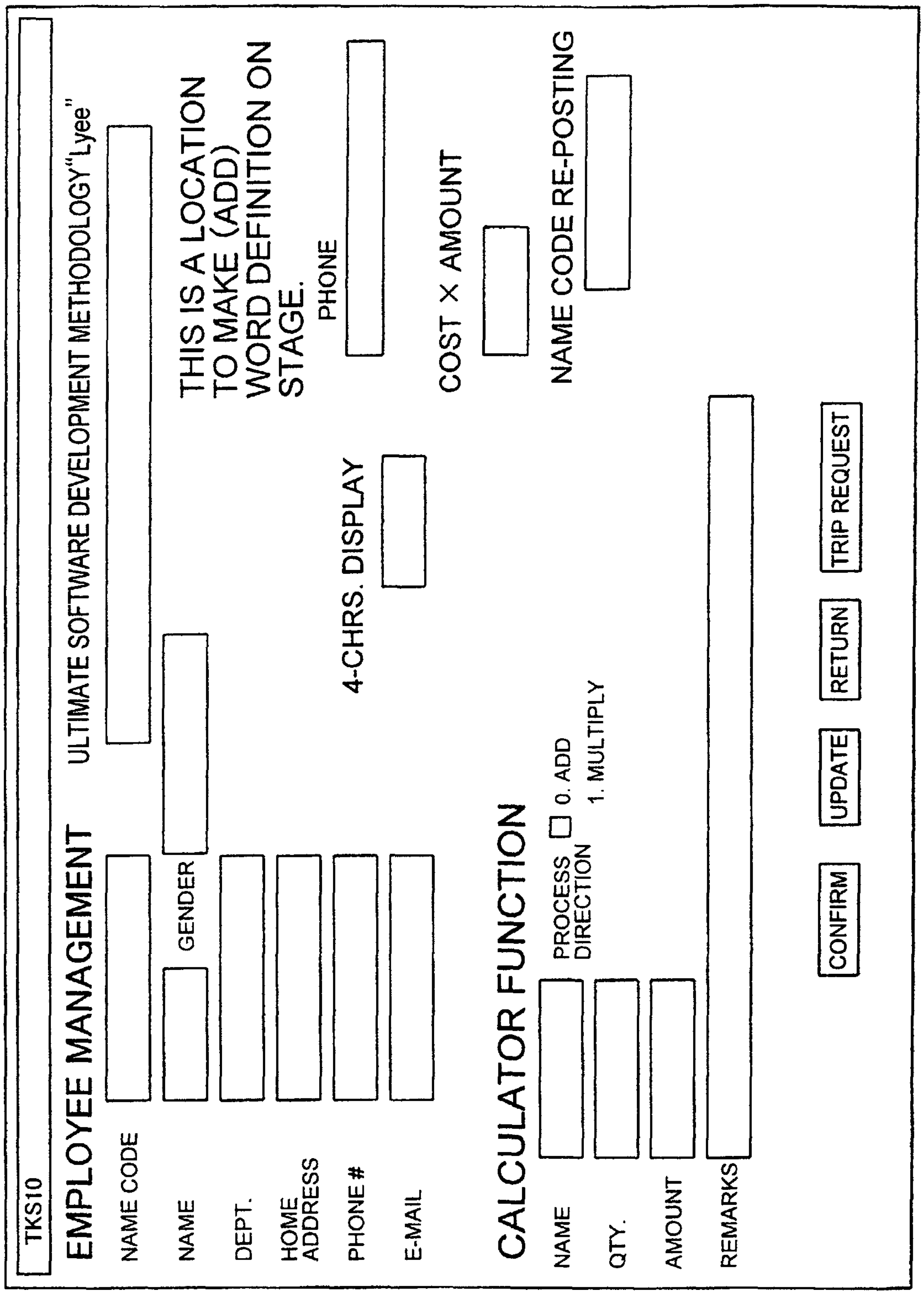

TKS10
EMPLOYEE MANAGEMENT
ULTIMATE SOFTWARE DEVELOPMENT METHODOLOGY"Lyee"
NAME CODE
NAME
GENDER
DEPT.
HOME ADDRESS
PHONE #
E-MAIL
THIS IS A LOCATION TO MAKE (ADD) WORD DEFINITION ON STAGE.
PHONE
4-CHRS. DISPLAY
COST × AMOUNT
NAME CODE RE-POSTING
CALCULATOR FUNCTION
NAME
PROCESS DIRECTION
0. ADD
1. MULTIPLY
QTY.
AMOUNT
REMARKS
CONFIRM
UPDATE
RETURN
TRIP REQUEST

FIG. 153

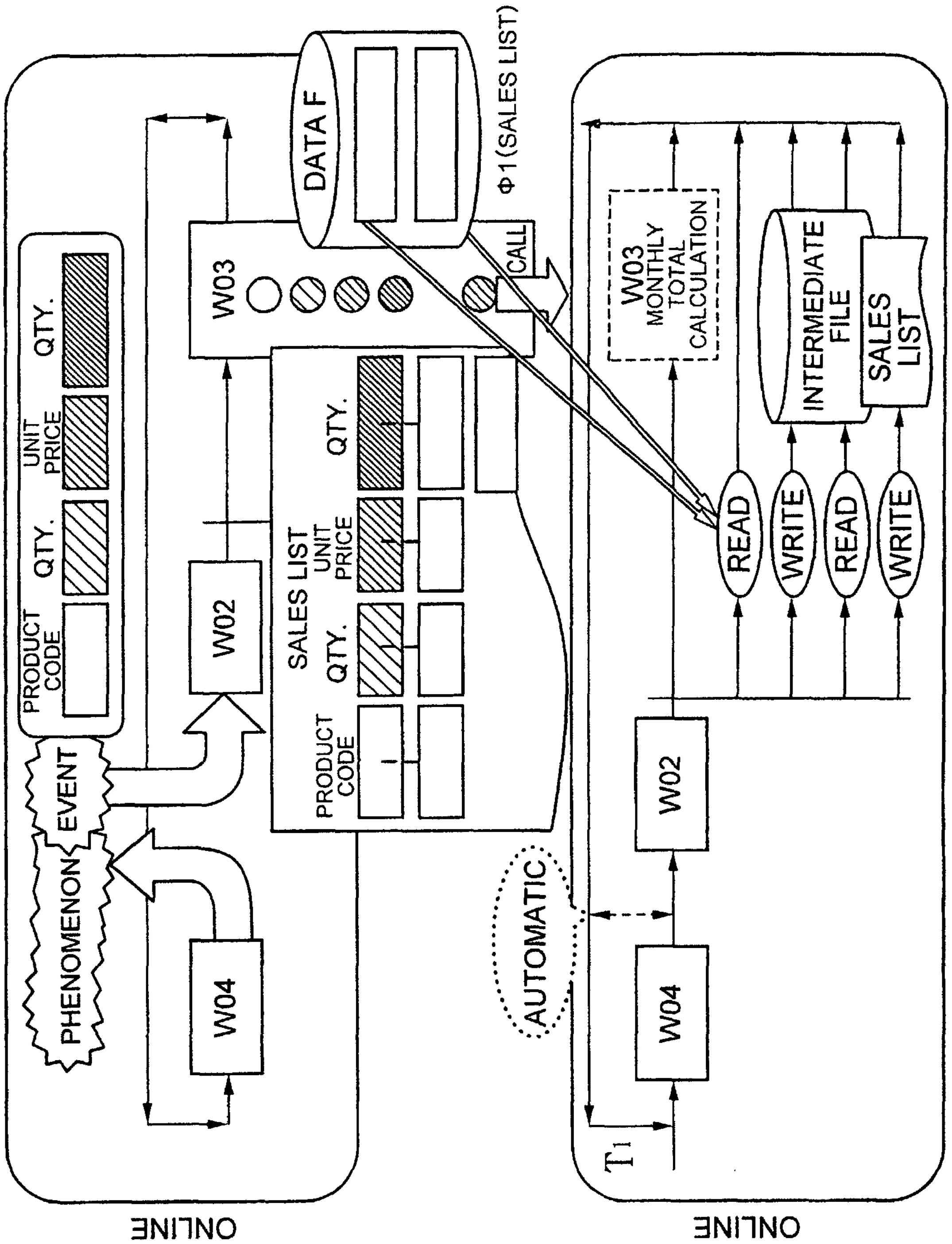
PHENOMENON
EVENT
PRODUCT CODE
QTY.
UNIT PRICE
QTY.
W04
W02
W03
SALES LIST
PRODUCT CODE
QTY.
UNIT PRICE
QTY.
DATA F
Φ1 (SALES LIST)
CALL
AUTOMATIC
W03 MONTHLY TOTAL CALCULATION
INTERMEDIATE FILE
SALES LIST
READ
WRITE
READ
WRITE
W04
W02
T1
ONLINE
ONLINE

FIG. 154

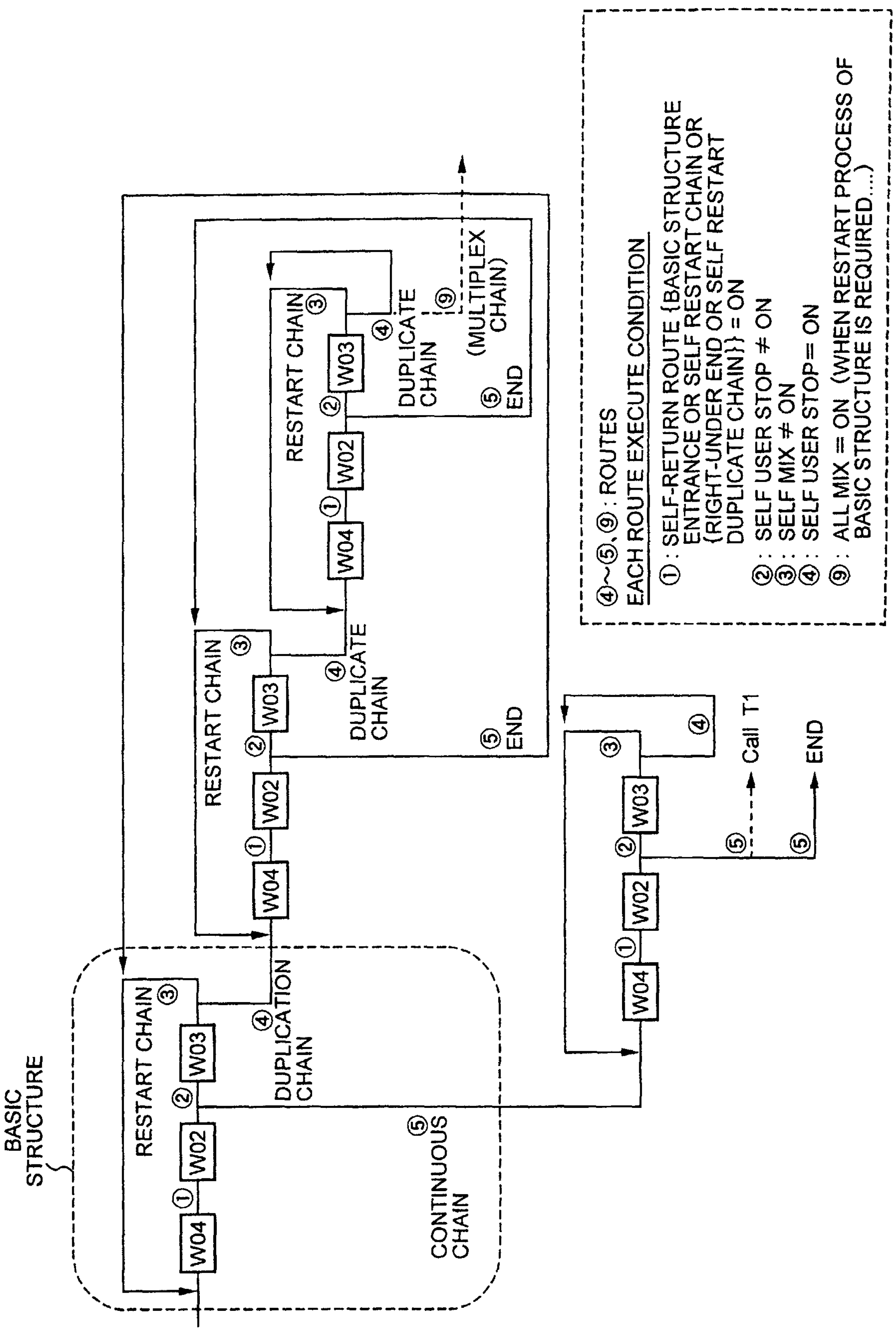
BASIC STRUCTURE
RESTART CHAIN
W04
W02
W03
DUPLICATION CHAIN
CONTINUOUS CHAIN
DUPLICATE CHAIN
END
(MULTIPLEX CHAIN)
Call T1
END
④~⑤, ⑨ : ROUTES
EACH ROUTE EXECUTE CONDITION
① : SELF-RETURN ROUTE {BASIC STRUCTURE ENTRANCE OR SELF RESTART CHAIN OR (RIGHT-UNDER END OR SELF RESTART DUPLICATE CHAIN)} = ON
② : SELF USER STOP ≠ ON
③ : SELF MIX ≠ ON
④ : SELF USER STOP= ON
⑨ : ALL MIX = ON (WHEN RESTART PROCESS OF BASIC STRUCTURE IS REQUIRED....)

FIG. 155

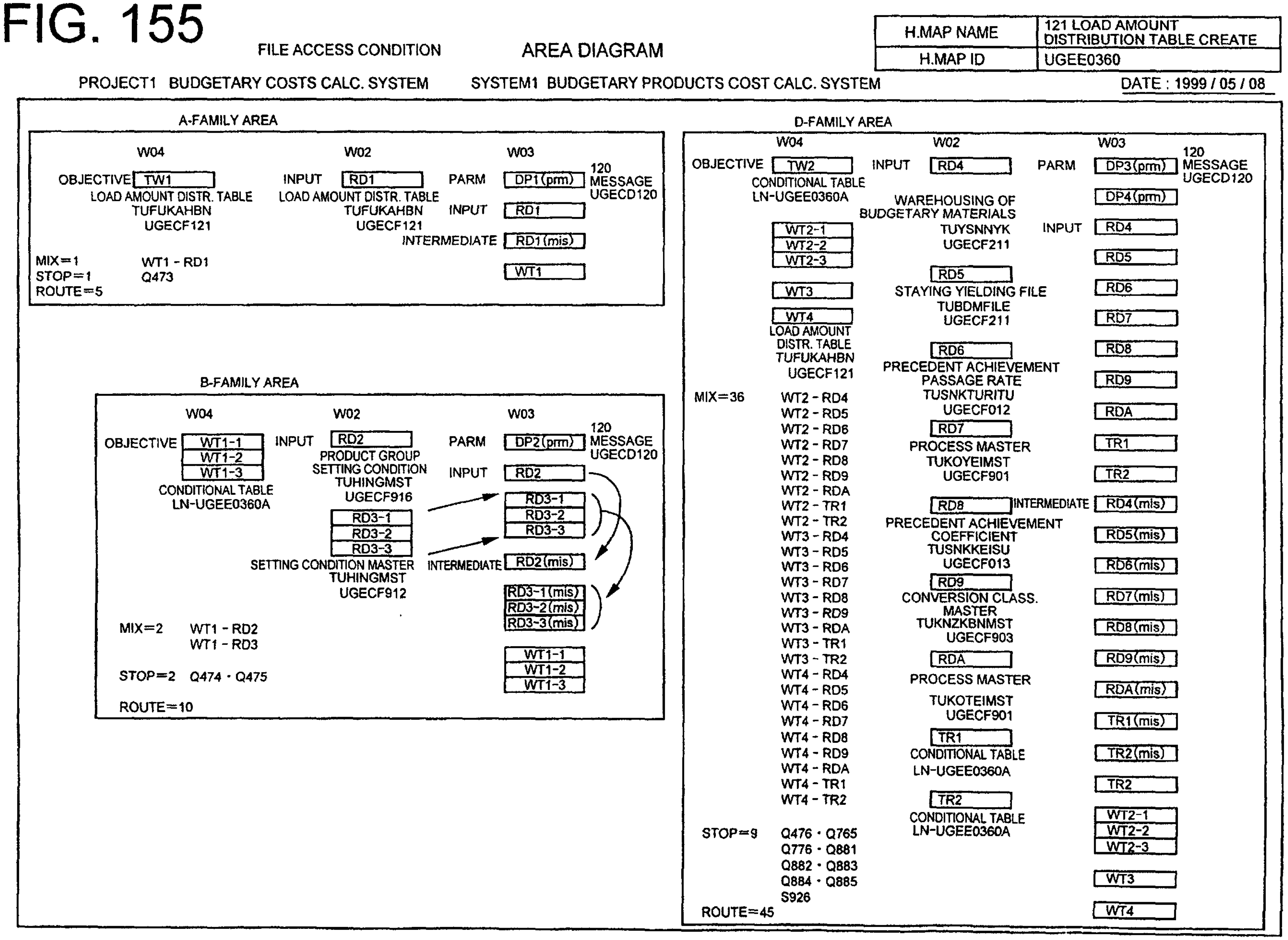
FILE ACCESS CONDITION
AREA DIAGRAM
H.MAP NAME
121 LOAD AMOUNT DISTRIBUTION TABLE CREATE
H.MAP ID
UGEE0360
PROJECT1 BUDGETARY COSTS CALC. SYSTEM
SYSTEM1 BUDGETARY PRODUCTS COST CALC. SYSTEM
DATE : 1999 / 05 / 08
A-FAMILY AREA
W04
W02
W03
OBJECTIVE
TW1
LOAD AMOUNT DISTR. TABLE
TUFUKAHBN
UGECF121
INPUT
RD1
LOAD AMOUNT DISTR. TABLE
TUFUKAHBN
UGECF121
PARM
DP1(prm)
120
MESSAGE
UGECD120
INPUT
RD1
INTERMEDIATE
RD1(mis)
WT1
MIX=1
STOP=1
ROUTE=5
WT1 - RD1
Q473
B-FAMILY AREA
W04
W02
W03
OBJECTIVE
WT1-1
WT1-2
WT1-3
CONDITIONAL TABLE
LN-UGEE0360A
INPUT
RD2
PRODUCT GROUP
SETTING CONDITION
TUHINGMST
UGECF916
RD3-1
RD3-2
RD3-3
SETTING CONDITION MASTER
TUHINGMST
UGECF912
PARM
DP2(prm)
120
MESSAGE
UGECD120
INPUT
RD2
RD3-1
RD3-2
RD3-3
INTERMEDIATE
RD2(mis)
RD3-1(mis)
RD3-2(mis)
RD3-3(mis)
WT1-1
WT1-2
WT1-3
MIX=2
WT1 - RD2
WT1 - RD3
STOP=2
Q474 · Q475
ROUTE=10
D-FAMILY AREA
W04
W02
W03
OBJECTIVE
TW2
CONDITIONAL TABLE
LN-UGEE0360A
WT2-1
WT2-2
WT2-3
WT3
WT4
LOAD AMOUNT
DISTR. TABLE
TUFUKAHBN
UGECF121
INPUT
RD4
WAREHOUSING OF
BUDGETARY MATERIALS
TUYSNNYK
UGECF211
RD5
STAYING YIELDING FILE
TUBDMFILE
UGECF211
RD6
PRECEDENT ACHIEVEMENT
PASSAGE RATE
TUSNKTURITU
UGECF012
RD7
PROCESS MASTER
TUKOYEIMST
UGECF901
RD8
PRECEDENT ACHIEVEMENT
COEFFICIENT
TUSNKKEISU
UGECF013
RD9
CONVERSION CLASS.
MASTER
TUKNZKBNMST
UGECF903
RDA
PROCESS MASTER
TUKOTEIMST
UGECF901
TR1
CONDITIONAL TABLE
LN-UGEE0360A
TR2
CONDITIONAL TABLE
LN-UGEE0360A
PARM
DP3(prm)
120
MESSAGE
UGECD120
DP4(prm)
INPUT
RD4
RD5
RD6
RD7
RD8
RD9
RDA
TR1
TR2
INTERMEDIATE
RD4(mis)
RD5(mis)
RD6(mis)
RD7(mis)
RD8(mis)
RD9(mis)
RDA(mis)
TR1(mis)
TR2(mis)
TR2
WT2-1
WT2-2
WT2-3
WT3
WT4
MIX=36
WT2 - RD4
WT2 - RD5
WT2 - RD6
WT2 - RD7
WT2 - RD8
WT2 - RD9
WT2 - RDA
WT2 - TR1
WT2 - TR2
WT3 - RD4
WT3 - RD5
WT3 - RD6
WT3 - RD7
WT3 - RD8
WT3 - RD9
WT3 - RDA
WT3 - TR1
WT3 - TR2
WT4 - RD4
WT4 - RD5
WT4 - RD6
WT4 - RD7
WT4 - RD8
WT4 - RD9
WT4 - RDA
WT4 - TR1
WT4 - TR2
STOP=9
Q476 · Q765
Q776 · Q881
Q882 · Q883
Q884 · Q885
S926
ROUTE=45

# FIG. 156

PALLET GENERATION ACTION VECTOR OPERATOR TABLE

| SYSTEM | | PROCESS.No | HOMOGENEITY MAP NAME | H. MAP ID | AUTHOR | DATE | APPROVED | UPDATE DATE | PAGE |
|---|---|---|---|---|---|---|---|---|---|
| | OOOO COMPANY | | | | | | | | |
| | BUDGETARY PRODUCTS COST CALC. SYSTEM | 121 | LOAD AMOUNT DISTR. TABLE CREATE | UGEE0360 | OOOO | 1999/4/29 | | 1999/5/15 | 1/9 |

| PAGE # | BASIC STRUCTURE GROUP | ORDER | PALLET ID | CLASS. | ACTION VECTOR KIND | | IDENTIFIER-1 | IDENTIFIER-2 | APPLICATION | SETTING | EXECUTE CONDITION | SETTING | PROCESS | SETTING | ACCEPTANCE JUDGMENT | SETTING | ACCEPTANCE PROCESS | SETTING | SETTING REFUSAL PROCESS |
|---|---|---|---|---|---|---|---|---|---|---|---|---|---|---|---|---|---|---|---|
| 1 | A | a-1 | UGEQ4734 | W04 | 01 | ROUTE | PNT1 | P-473-1 | NEXT PALLET SET(W02) | | {BASIC STRUCTURE'S ENTRANCE ROUTE (PD00-0)='1' OR (P473-3 COMPLETE='1') OR {(473-4 COMPLETE='1') UGEQ4732 | | | | | | | | |
| 2 | | | | | | | | | | | | | | | | | | | |
| 3 | | | | | 02 | STRUCTURE | PBOX | RD1 | CONTROL BOX CLEAR | | PD00='1' | | READ-FAMILY'S AREA/FLAG TO BE CLEARED | | | | | | |
| 4 | | | | | | | | | | | | | …{END FLAG, EOF FLAG,{KEY READ AREA/KEY READ END FLAG}, OPEN FLAG, CLOSE FLAG} | | | | | | |
| 5 | | | | | | | PCR4 | RD1 | W02 INPUT AREA CLEAR | | MIX(WT1-RD1)≠'1' | | | | | | | | |
| 6 | | | | | | | PCR1 | RD1 | W03 INPUT AREA CREAR | | MIX(WT1-RD1)≠'1' | | | | | | | | |
| 7 | | | | | | | PCR2 | MD1 | W03 INTERMEDIATE (ms) AREA CLEAR | | OUTPUT DONE(WT1)='1' | | and RD1-CNY-OLD CLEAR (zero) | | | | | | |
| 8 | | | | | | | | | | | | | | | | | | | |
| 9 | | | | | | | PCR2 | WT1 | W03 INTERMEDIATE (OBJECT) AREA CLEAR | | OUTPUT DONE(WT1)='1' | | | | | | | | |
| 10 | | | | | | | PCR3 | WT1 | W04 INTERMEDIATE (mis) AREA CLEAR | | OUTPUT DONE(WT1)='1' | | | | | | | | |
| 11 | | | | | | | | | | | | | | | | | | | |
| 12 | | | | | | | PCR8 | RD1 | INPUT END FLAG CLEAR | | MIX(WT1-RD1)≠'1' | | | | | | | | |
| 13 | | | | | | | PCR5 | WT1-RD1 | MIX FLAG CLEAR | | OUTPUT DONE(WT1)='1' | | | | | | | | |
| 14 | | | | | | | PCR6 | WT1 | OBJECT END FLAG CLEAR | | OUTPUT DONE(WT1)='1' | | | | | | | | |
| 15 | | | | | | | | | | | | | | | | | | | |
| 16 | | | | | | | PCR0 | | ROUTE P-END FLAG CLEAR | | P-END FLAG AREA≠two-value | | | | | | | | |
| 17 | | | | | | | | | | | | | | | | | | | |
| 18 | | | | | | | | | | | | | | | | | | | |
| 19 | | | | | 03 | COMMAND | PDL1 | WT1 | Delete SET | | {USER STOP FLAG(RD1)≠'1'} and {OUTPUT DONE(WT1)≠'1'} + (OBJECT WORD≠EMPTY)+USER REQUIREMENT | | | | | | | | |
| 20 | | | | | | | PEND | WT1 | OUTPUT DONE FLAG COMPULSORY SET | | {END(P473-4 COMPLETE)≠'1'} and {USER STOP FLAG(RD1)≠'1'}and{OUTPUT DONE(WT1)≠'1'} and | | | | | | | | |
| 21 | | | | | | | | | | | {(MIX(WT1-RD1)='1'} and (ANY OF OBJECT WORDS=EMPTY)+USER REQUIREMENT | | | | | | | | |
| 22 | | | | | | | | | | | | | | | | | | | |
| 23 | | a-1 | UGEQ4734 | W02 | 01 | ROUTE | PNT1 | P473-2 | NEXT PALLET SET (W03) | | USER STOP FLAG(RD1)≠'1'(≠END) | | UGEQ4733 | | | | | | |
| 24 | | | | | | | PNT2 | P473-5 | NEXT PALLET SET (CONTINUOUS CHAIN) | | {USER STOP FLAG(RD1)≠'1'} and USER REQUIREMENT | | UGEQ4744 | | | | | | |
| 25 | | | | | | | | | | | | | | | | | | | |
| 26 | | | RD1 | | 03 | COMMAND | PRD1 | RD1 | FETCH SET | | (W02INPUT AREA=EMPTY) and (EOF≠'1') and(OPEN FLAG='1') and (USER STOP FLAG≠'1') | | | | | | | | |
| 27 | | | | | | | POP1 | RD1 | OPEN SET | | (OPEN FLAG≠'1') and (READ KEY WORK COMPLETE≠'1') | | | | | | | | |
| 28 | | | | | | | PCL1 | RD1 | CLOSE SET | | [{USER STOP FLAG(RD1)≠'1') or { EOF(RD1)='1'}] and( OPEN FLAG(RD1)='1') and { CLOSE FLAG(RD1)='1'} | | | | | | | | |
| 29 | | | | | | | F CONTROL | RD1 | OPEN CURSOR DEFINE AREA | | | | | | | | | | |
| 30 | | | | | | | | | | | | | | | | | | | |
| 31 | | a-1 | UGEQ4733 | W03 | 01 | ROUTE | PNT1 | P473-3 | NEXT PALLET SET (RESTART CHAIN) | | {MIX(WT1-RD1)≠'1'} and {P473-2-END='1'} | | UGEQ4734 | | | | | | |
| 32 | | | | | | | PNT2 | P473-4 | NEXT PALLET SET (DUPLICATE CHAIN) | | {MIX(WT1-RD1)='1'} and {P473-2-END='1' | | UGEQ4734 | | | | | | |
| 33 | | | | | | | | | | | | | | | | | | | |
| 34 | | | | | | | | | | | | | | | | | | | |
| 35 | | | | | 02 | STRUCTURE | PMP1 | WT1-RD1 | MIX FLAG SET | | RD1…(BEFORE-EXECUTE COUNTER≠0) and (BEFORE-EXECUTE COUNTER≠EXECUTE COUNTER) | | | | | | | | |
| 36 | | | | | | | PSP1 | RD1 | USER STOP FLAG SET (FOR EVERY BASIC STRUCTURE) | | {(COMMAND ERROR FLAG='1') or (EOF='1')}+USER REQUIREMENT(END) | | | | | | | | |
| 37 | | | | | | | | | | | | | | | | | | | |
| 38 | | | | | | | PMK1 | RD1 | KEY DUPLICATE | | RD1-CNT-OLD-=ZERO | | New→Old | | | | | | |
| 39 | | | | | | | | | | | | | | | | | | | |
| 40 | | | DP1 | | 03 | COMMAND | PCV1 | DP1 | CODE-RECEIVE CHECK PARAMETER READ (CATCH VALUE) | | AFTER-PARAMETER CONVERSION AREA = EMPTY | | 120 MESSAGE | | | | | | |
| 41 | | | | | | | | | | | | | | | | | | | |
| 42 | | | | | | | PKY1 | RD1 | READ KEY STRATEGY | | (READ KEY AREA = EMPTY) and (READ KEY STRATEGY COMPLETE≠'1') | | 1-5 (BASIC KEY) ← DP1, INDIVIDUAL MODIFICATION CLASS. ← SPACE | | | | | | |
| 43 | | | | | | | | | | | | | | | | | | | |
| 44 | | | | | | | | | | | | | | | | | | | |
| | | | | | TOTAL NUMBER OF ACTION VECTORS | | | | | 0 | NUMBER OF OWN SETTINGS 0 | 0 | | 0 | | 0 | | 0 | |

FIG. 157

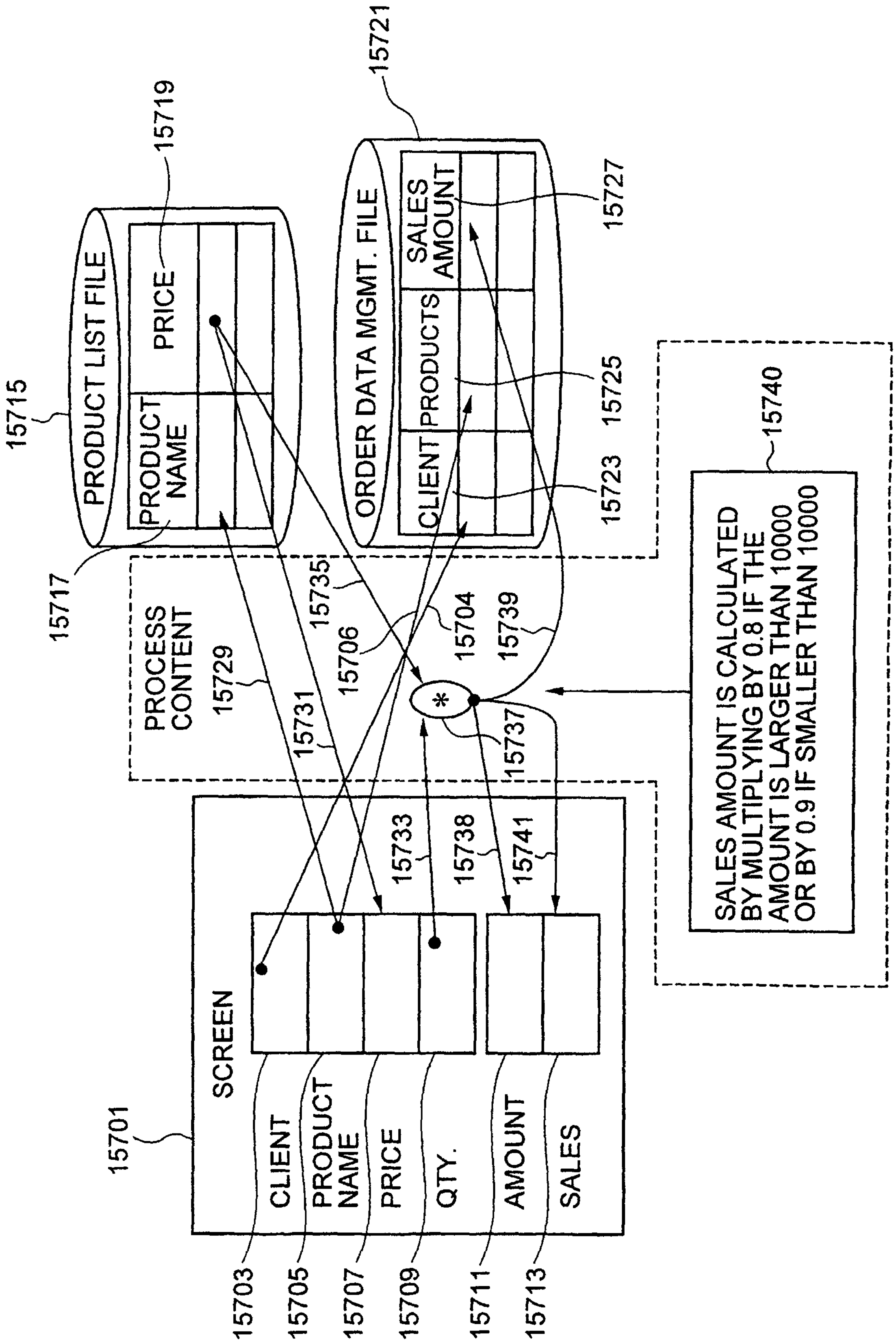
PRODUCT LIST FILE
PRODUCT NAME
PRICE
ORDER DATA MGMT. FILE
CLIENT
PRODUCTS
SALES AMOUNT
PROCESS CONTENT
*
SCREEN
CLIENT
PRODUCT NAME
PRICE
QTY.
AMOUNT
SALES
SALES AMOUNT IS CALCULATED BY MULTIPLYING BY 0.8 IF THE AMOUNT IS LARGER THAN 10000 OR BY 0.9 IF SMALLER THAN 10000
15701
15703
15704
15705
15706
15707
15709
15711
15713
15715
15717
15719
15721
15723
15725
15727
15729
15731
15733
15735
15737
15738
15739
15740
15741

FIG. 158

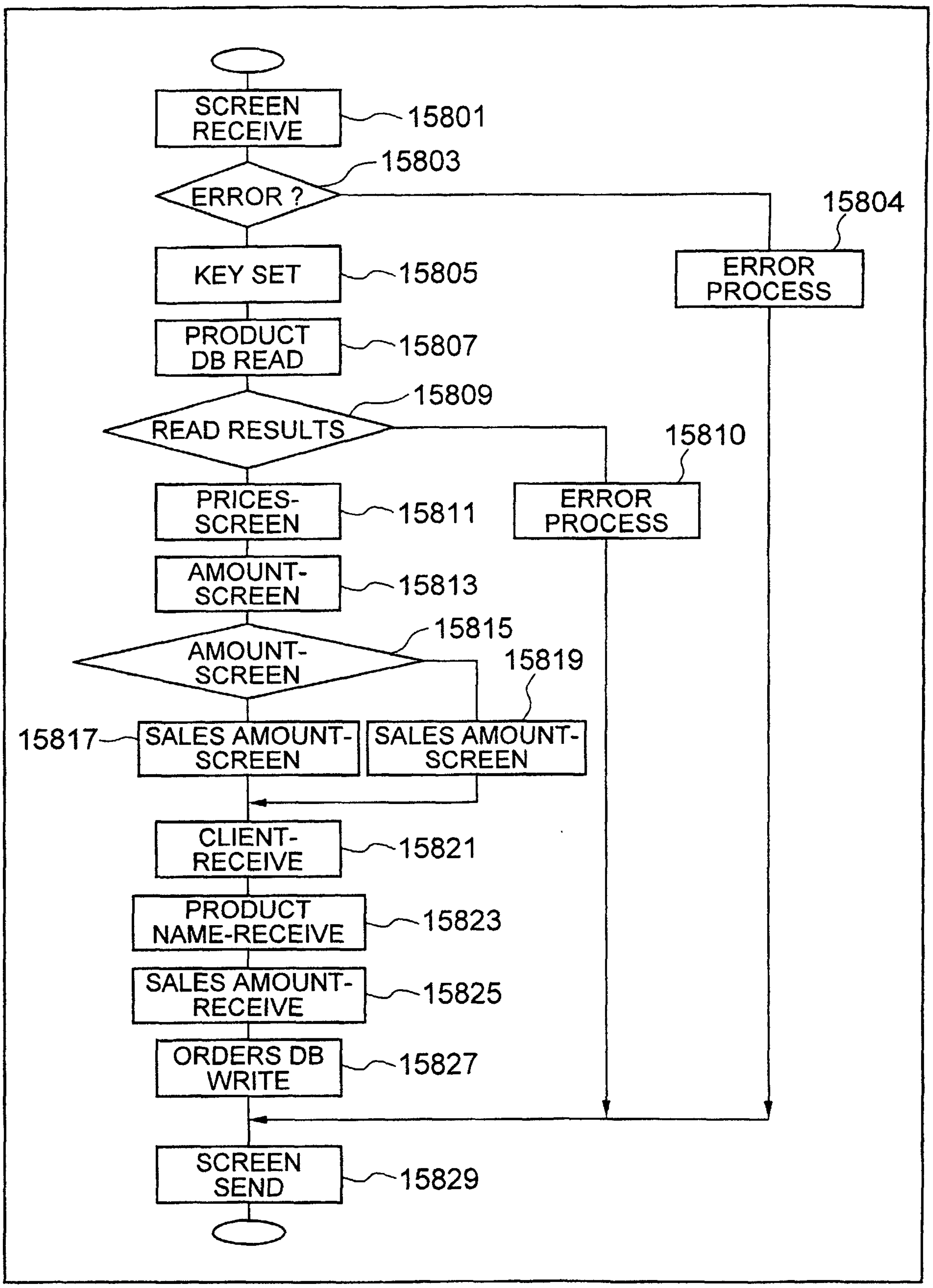
SCREEN RECEIVE
15801
15803
ERROR ?
15804
ERROR PROCESS
KEY SET
15805
PRODUCT DB READ
15807
15809
READ RESULTS
15810
ERROR PROCESS
PRICES-SCREEN
15811
AMOUNT-SCREEN
15813
15815
AMOUNT-SCREEN
15819
15817
SALES AMOUNT-SCREEN
SALES AMOUNT-SCREEN
CLIENT-RECEIVE
15821
PRODUCT NAME-RECEIVE
15823
SALES AMOUNT-RECEIVE
15825
ORDERS DB WRITE
15827
SCREEN SEND
15829

# FIG. 159

```
SCREEN RECEIVE ~15901

1F CLIENT NAME-SCREEN = SPACE OR PRODUCT
NAME-SCREEN = SPACE
                OR QTY-SCREEN = ZERO          ~15903

MOVE 99999 TO SALES AMOUNT-SCREEN ~15904

ELSE

MOVE PRODUCT NAME-SCREEN TO ~15905                 15907
PRODUCT NAME-PRODUCT DB

SELECT PRICE
FROM PRODUCT DB INTO; PRICE-PRODUCT DB WHERE PRODUCT
NAME=:PRODUCT NAME-PRODUCT DB

IF STATUS NOT=ZERO ~15909

   MOVE 99999 TO PRICE-SCREEN ~15910

   ELSE

   MOVE PRICE-PRODUCT DB TO PRICE-SCREEN ~15911
15915
   COMPUTE AMOUNT-SCREEN=PRICE-SCREEN ~15913
    * QTY-SCREEN
1F AMOUNT-SCREEN>10000 COMPUTE SALES AMOUNT-SCREEN =
= AMOUNT-SCREEN * 0.8 ~15917
   ELSE

   COMPUTE SALES AMOUNT-SCREEN = AMOUNT-SCREEN *0.9

   END-IF.                                              15919

   MOVE CLIENT-SCREEN TO CLIENT-ORDER RECORD ~15921

   MOVE PRODUCT NAME-SCREEN TO PRODUCT NAME-
   ORDER RECORD                                 ~15923
   MOVE SALES AMOUNT-SCREEN TO SALES AMOUNT-   ~15925
   ORDER RECORD
   INSERT INTO ORDER DB ~15927

  END-IF

END-IF.

SCREEN SEND. ~15929
```

FIG. 160

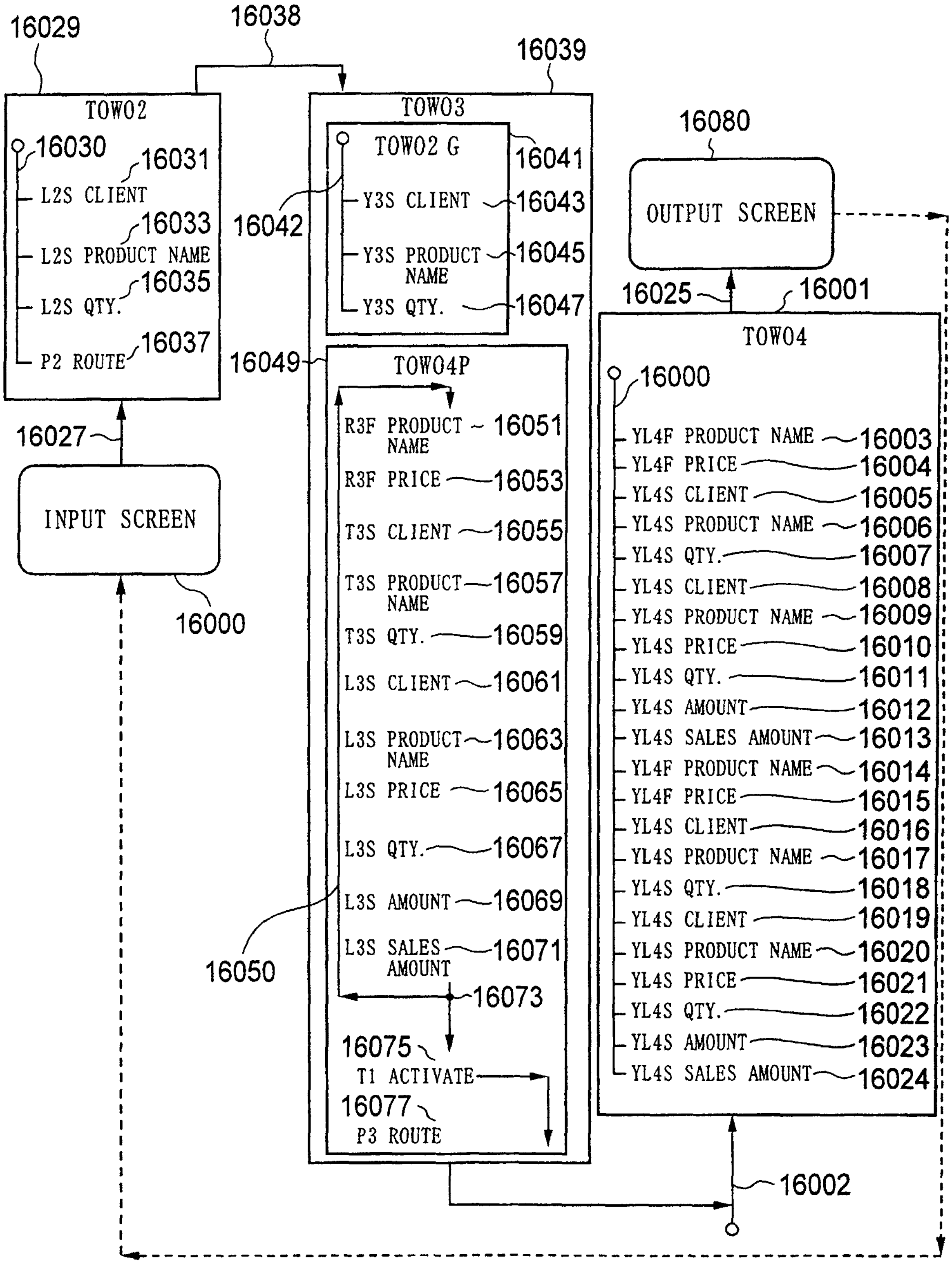
16029
16038
16039
TOW02
16030
16031
L2S CLIENT
16033
L2S PRODUCT NAME
16035
L2S QTY.
16037
P2 ROUTE
TOW03
TOW02 G
16041
16042
Y3S CLIENT
16043
Y3S PRODUCT NAME
16045
Y3S QTY.
16047
16080
OUTPUT SCREEN
16025
16001
TOW04
16000
16049
TOW04P
R3F PRODUCT NAME
16051
R3F PRICE
16053
T3S CLIENT
16055
T3S PRODUCT NAME
16057
T3S QTY.
16059
L3S CLIENT
16061
L3S PRODUCT NAME
16063
L3S PRICE
16065
L3S QTY.
16067
L3S AMOUNT
16069
L3S SALES AMOUNT
16071
16073
16075
T1 ACTIVATE
16077
P3 ROUTE
16050
16027
INPUT SCREEN
16000
YL4F PRODUCT NAME 16003
YL4F PRICE 16004
YL4S CLIENT 16005
YL4S PRODUCT NAME 16006
YL4S QTY. 16007
YL4S CLIENT 16008
YL4S PRODUCT NAME 16009
YL4S PRICE 16010
YL4S QTY. 16011
YL4S AMOUNT 16012
YL4S SALES AMOUNT 16013
YL4F PRODUCT NAME 16014
YL4F PRICE 16015
YL4S CLIENT 16016
YL4S PRODUCT NAME 16017
YL4S QTY. 16018
YL4S CLIENT 16019
YL4S PRODUCT NAME 16020
YL4S PRICE 16021
YL4S QTY. 16022
YL4S AMOUNT 16023
YL4S SALES AMOUNT 16024
16002

FIG. 161

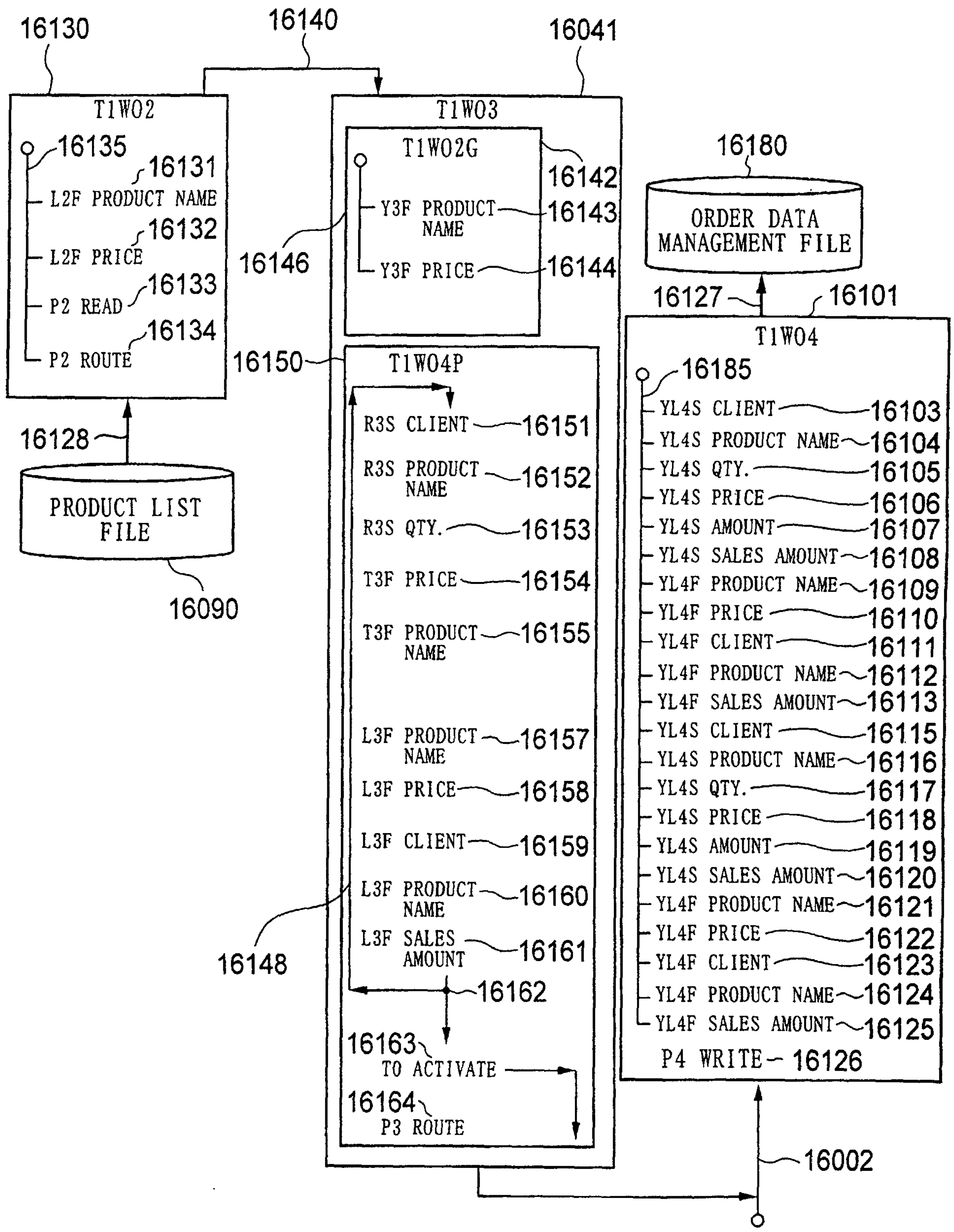
16130
16140
16041
T1W02
16135
16131
L2F PRODUCT NAME
16132
L2F PRICE
16133
P2 READ
16134
P2 ROUTE
16128
PRODUCT LIST FILE
16090
T1W03
T1W02G
16142
Y3F PRODUCT NAME
16143
16146
Y3F PRICE
16144
16150
T1W04P
R3S CLIENT
16151
R3S PRODUCT NAME
16152
R3S QTY.
16153
T3F PRICE
16154
T3F PRODUCT NAME
16155
L3F PRODUCT NAME
16157
L3F PRICE
16158
L3F CLIENT
16159
L3F PRODUCT NAME
16160
16148
L3F SALES AMOUNT
16161
16162
16163
TO ACTIVATE
16164
P3 ROUTE
16180
ORDER DATA MANAGEMENT FILE
16127
16101
T1W04
16185
YL4S CLIENT
16103
YL4S PRODUCT NAME
16104
YL4S QTY.
16105
YL4S PRICE
16106
YL4S AMOUNT
16107
YL4S SALES AMOUNT
16108
YL4F PRODUCT NAME
16109
YL4F PRICE
16110
YL4F CLIENT
16111
YL4F PRODUCT NAME
16112
YL4F SALES AMOUNT
16113
YL4S CLIENT
16115
YL4S PRODUCT NAME
16116
YL4S QTY.
16117
YL4S PRICE
16118
YL4S AMOUNT
16119
YL4S SALES AMOUNT
16120
YL4F PRODUCT NAME
16121
YL4F PRICE
16122
YL4F CLIENT
16123
YL4F PRODUCT NAME
16124
YL4F SALES AMOUNT
16125
P4 WRITE
16126
16002

FIG. 162

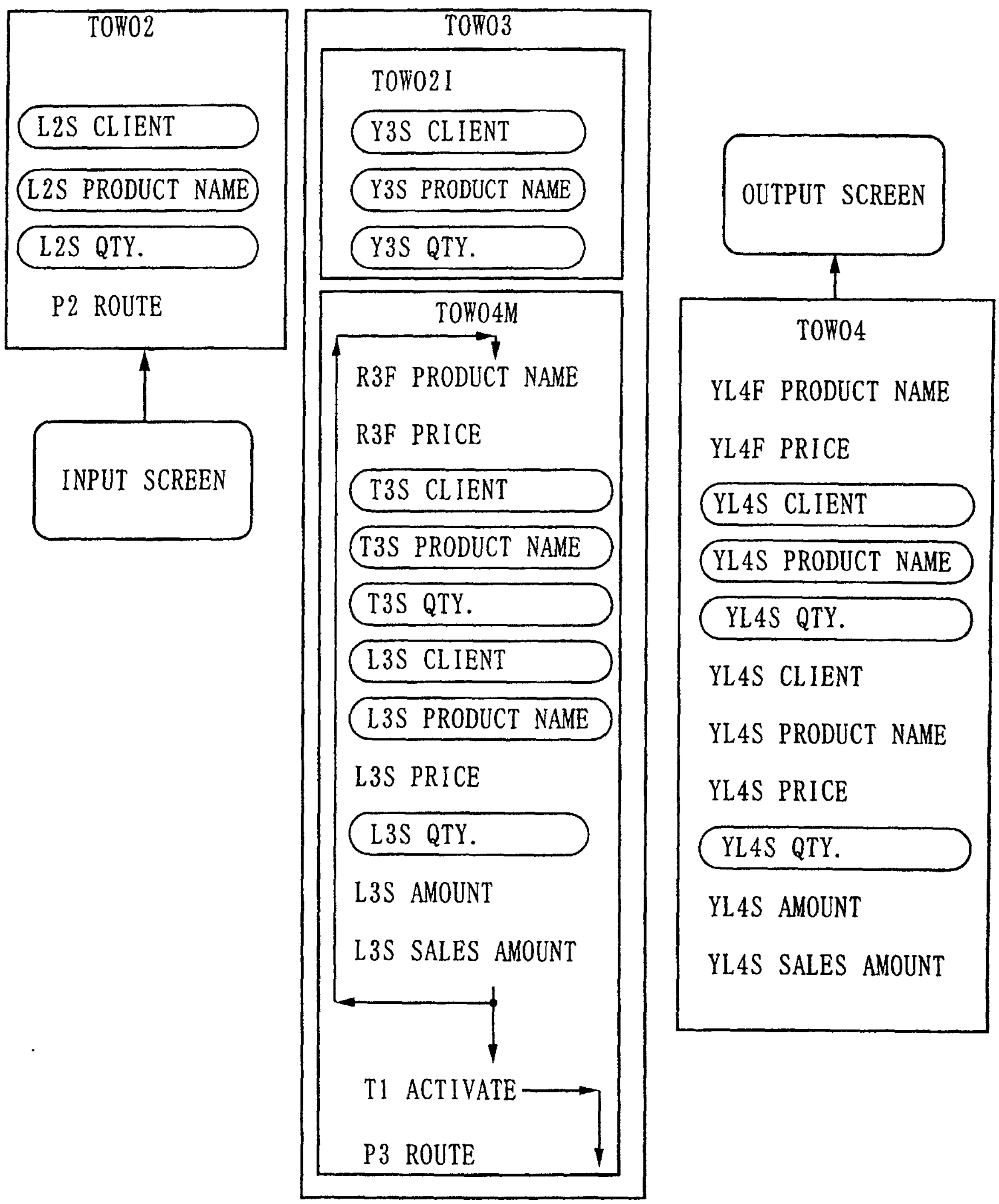
TOW02
L2S CLIENT
L2S PRODUCT NAME
L2S QTY.
P2 ROUTE
INPUT SCREEN
TOW03
TOW02I
Y3S CLIENT
Y3S PRODUCT NAME
Y3S QTY.
TOW04M
R3F PRODUCT NAME
R3F PRICE
T3S CLIENT
T3S PRODUCT NAME
T3S QTY.
L3S CLIENT
L3S PRODUCT NAME
L3S PRICE
L3S QTY.
L3S AMOUNT
L3S SALES AMOUNT
T1 ACTIVATE
P3 ROUTE
OUTPUT SCREEN
TOW04
YL4F PRODUCT NAME
YL4F PRICE
YL4S CLIENT
YL4S PRODUCT NAME
YL4S QTY.
YL4S CLIENT
YL4S PRODUCT NAME
YL4S PRICE
YL4S QTY.
YL4S AMOUNT
YL4S SALES AMOUNT

# FIG. 163

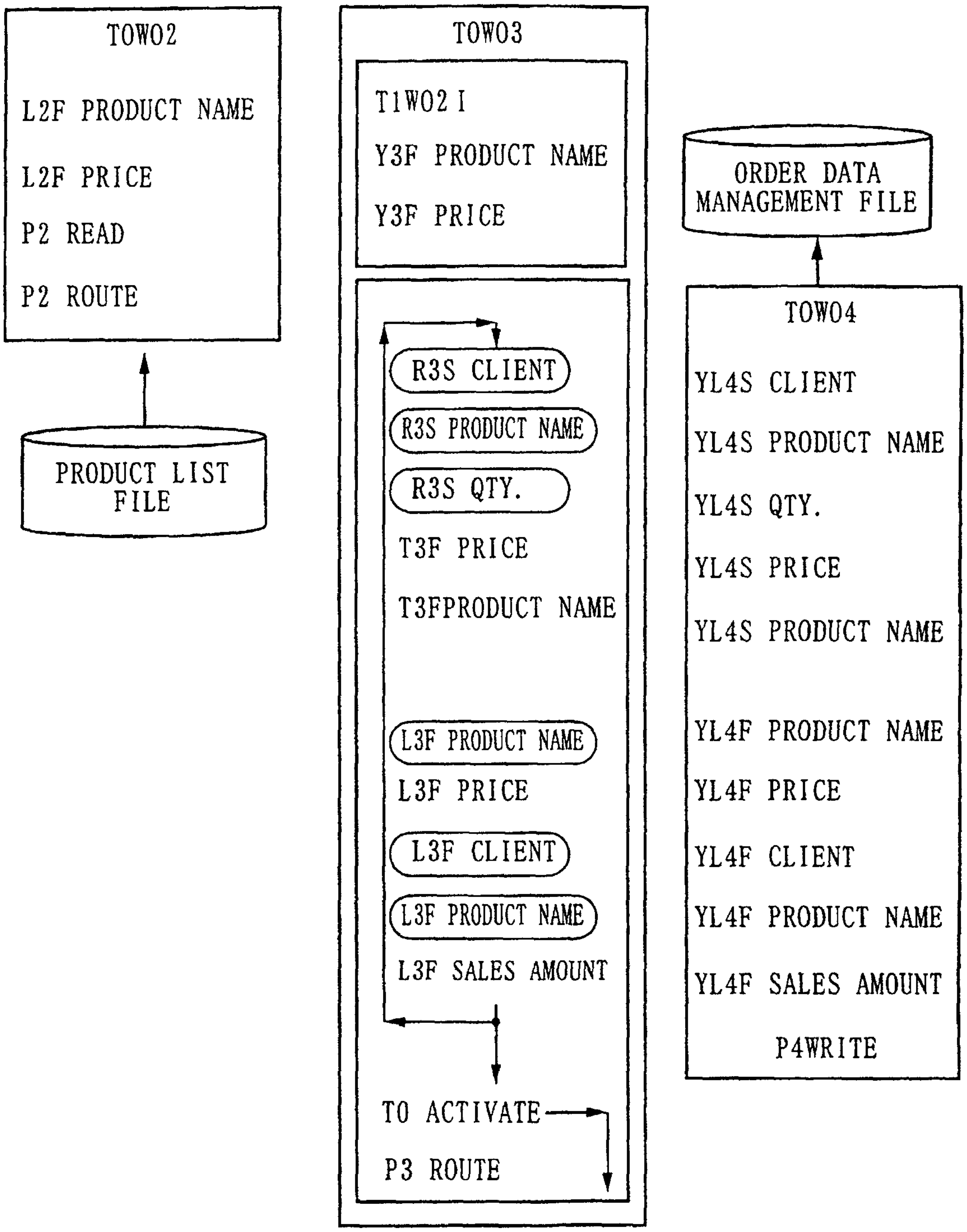
TOW02
L2F PRODUCT NAME
L2F PRICE
P2 READ
P2 ROUTE
PRODUCT LIST FILE
TOW03
T1W02 I
Y3F PRODUCT NAME
Y3F PRICE
R3S CLIENT
R3S PRODUCT NAME
R3S QTY.
T3F PRICE
T3FPRODUCT NAME
L3F PRODUCT NAME
L3F PRICE
L3F CLIENT
L3F PRODUCT NAME
L3F SALES AMOUNT
TO ACTIVATE
P3 ROUTE
ORDER DATA MANAGEMENT FILE
TOW04
YL4S CLIENT
YL4S PRODUCT NAME
YL4S QTY.
YL4S PRICE
YL4S PRODUCT NAME
YL4F PRODUCT NAME
YL4F PRICE
YL4F CLIENT
YL4F PRODUCT NAME
YL4F SALES AMOUNT
P4WRITE

# FIG. 164

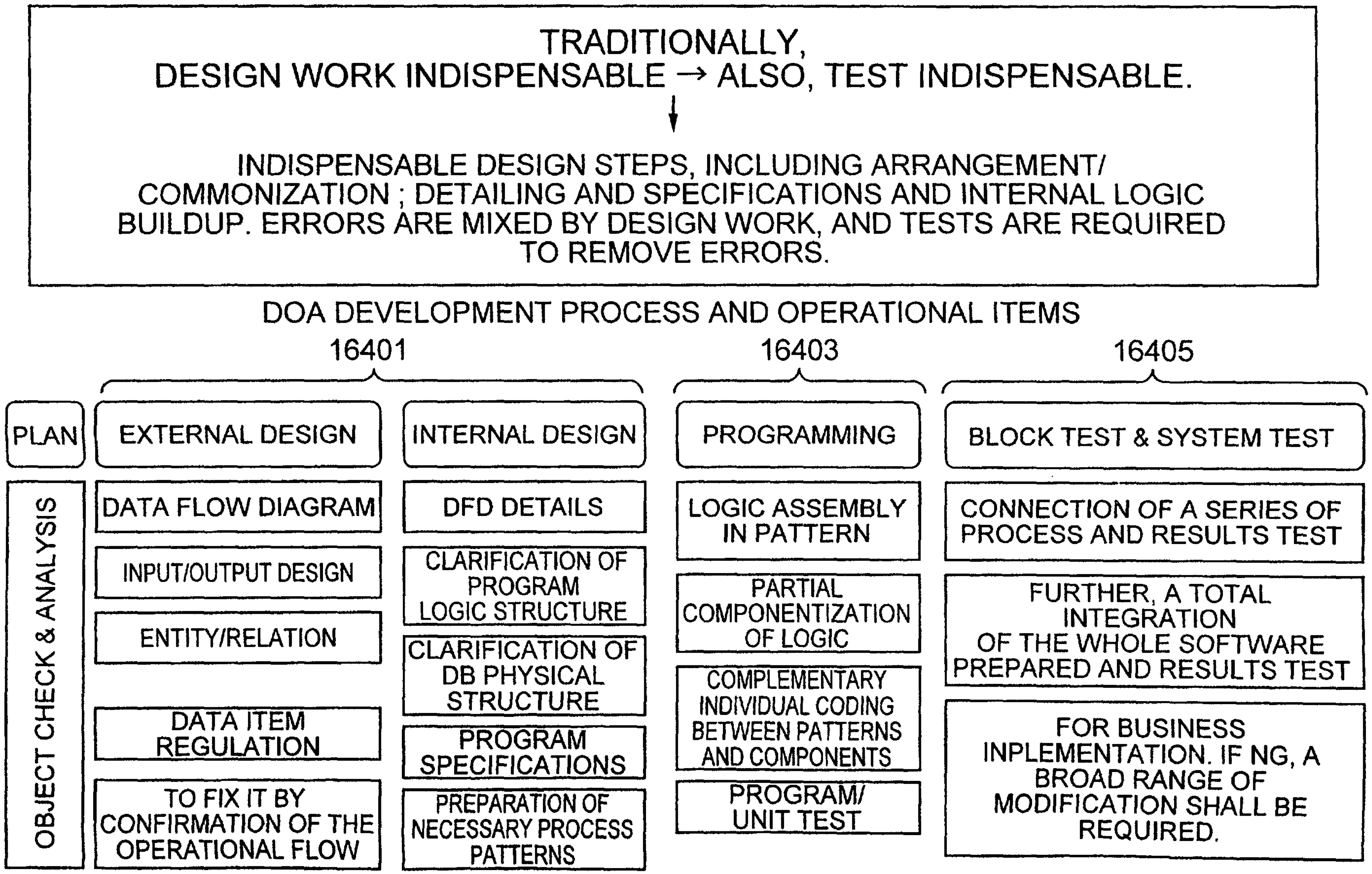
TRADITIONALLY,
DESIGN WORK INDISPENSABLE → ALSO, TEST INDISPENSABLE.
INDISPENSABLE DESIGN STEPS, INCLUDING ARRANGEMENT/ COMMONIZATION ; DETAILING AND SPECIFICATIONS AND INTERNAL LOGIC BUILDUP. ERRORS ARE MIXED BY DESIGN WORK, AND TESTS ARE REQUIRED TO REMOVE ERRORS.
DOA DEVELOPMENT PROCESS AND OPERATIONAL ITEMS
16401
16403
16405
PLAN
OBJECT CHECK & ANALYSIS
EXTERNAL DESIGN
DATA FLOW DIAGRAM
INPUT/OUTPUT DESIGN
ENTITY/RELATION
DATA ITEM REGULATION
TO FIX IT BY CONFIRMATION OF THE OPERATIONAL FLOW
INTERNAL DESIGN
DFD DETAILS
CLARIFICATION OF PROGRAM LOGIC STRUCTURE
CLARIFICATION OF DB PHYSICAL STRUCTURE
PROGRAM SPECIFICATIONS
PREPARATION OF NECESSARY PROCESS PATTERNS
PROGRAMMING
LOGIC ASSEMBLY IN PATTERN
PARTIAL COMPONENTIZATION OF LOGIC
COMPLEMENTARY INDIVIDUAL CODING BETWEEN PATTERNS AND COMPONENTS
PROGRAM/ UNIT TEST
BLOCK TEST & SYSTEM TEST
CONNECTION OF A SERIES OF PROCESS AND RESULTS TEST
FURTHER, A TOTAL INTEGRATION OF THE WHOLE SOFTWARE PREPARED AND RESULTS TEST
FOR BUSINESS INPLEMENTATION. IF NG, A BROAD RANGE OF MODIFICATION SHALL BE REQUIRED.

FIG. 165

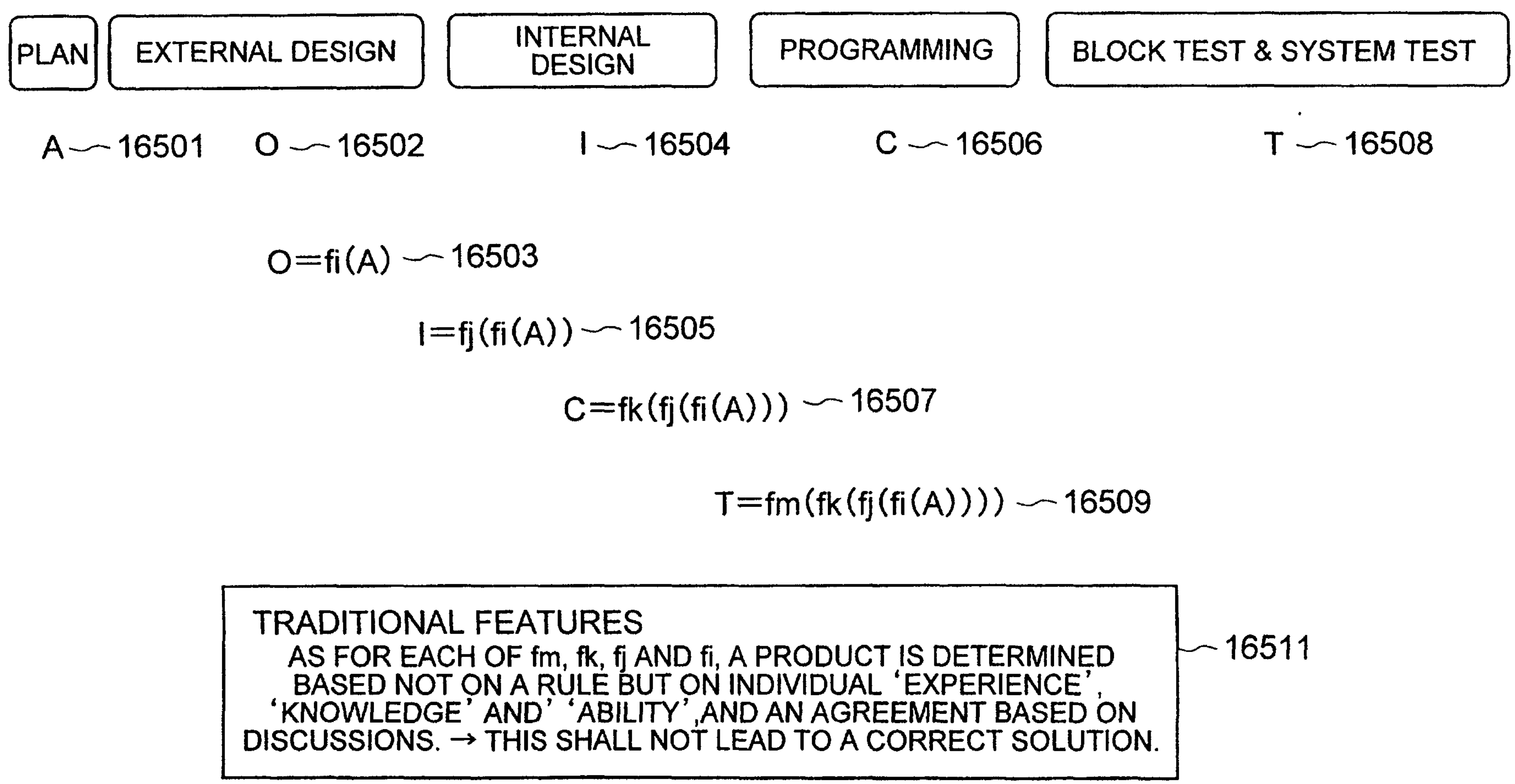
PLAN
EXTERNAL DESIGN
INTERNAL DESIGN
PROGRAMMING
BLOCK TEST & SYSTEM TEST
A 16501
O 16502
I 16504
C 16506
T 16508
O=fi(A) 16503
I=fj(fi(A)) 16505
C=fk(fj(fi(A))) 16507
T=fm(fk(fj(fi(A)))) 16509
TRADITIONAL FEATURES
AS FOR EACH OF fm, fk, fj AND fi, A PRODUCT IS DETERMINED BASED NOT ON A RULE BUT ON INDIVIDUAL 'EXPERIENCE', 'KNOWLEDGE' AND' 'ABILITY',AND AN AGREEMENT BASED ON DISCUSSIONS. → THIS SHALL NOT LEAD TO A CORRECT SOLUTION.
16511

FIG. 166

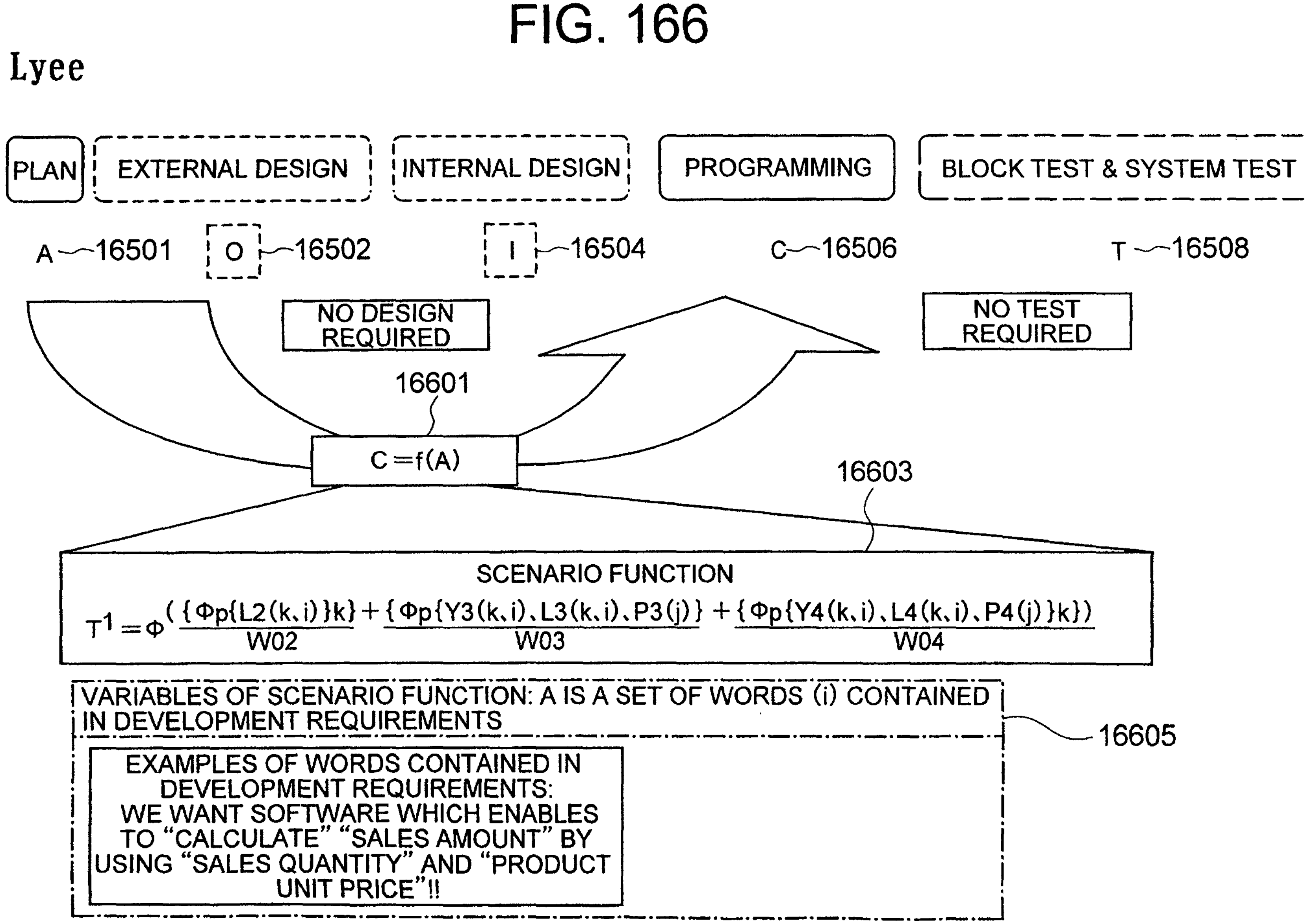
Lyee
PLAN
EXTERNAL DESIGN
INTERNAL DESIGN
PROGRAMMING
BLOCK TEST & SYSTEM TEST
A 16501
O 16502
I 16504
C 16506
T 16508
NO DESIGN REQUIRED
NO TEST REQUIRED
16601
C=f(A)
16603
SCENARIO FUNCTION
T1 = Φ({Φp{L2(k,i)}k}/W02 + {Φp{Y3(k,i),L3(k,i),P3(j)}/W03 + {Φp{Y4(k,i),L4(k,i),P4(j)}k})/W04
VARIABLES OF SCENARIO FUNCTION: A IS A SET OF WORDS (i) CONTAINED IN DEVELOPMENT REQUIREMENTS
16605
EXAMPLES OF WORDS CONTAINED IN DEVELOPMENT REQUIREMENTS:
WE WANT SOFTWARE WHICH ENABLES TO "CALCULATE" "SALES AMOUNT" BY USING "SALES QUANTITY" AND "PRODUCT UNIT PRICE"!!

FIG. 167

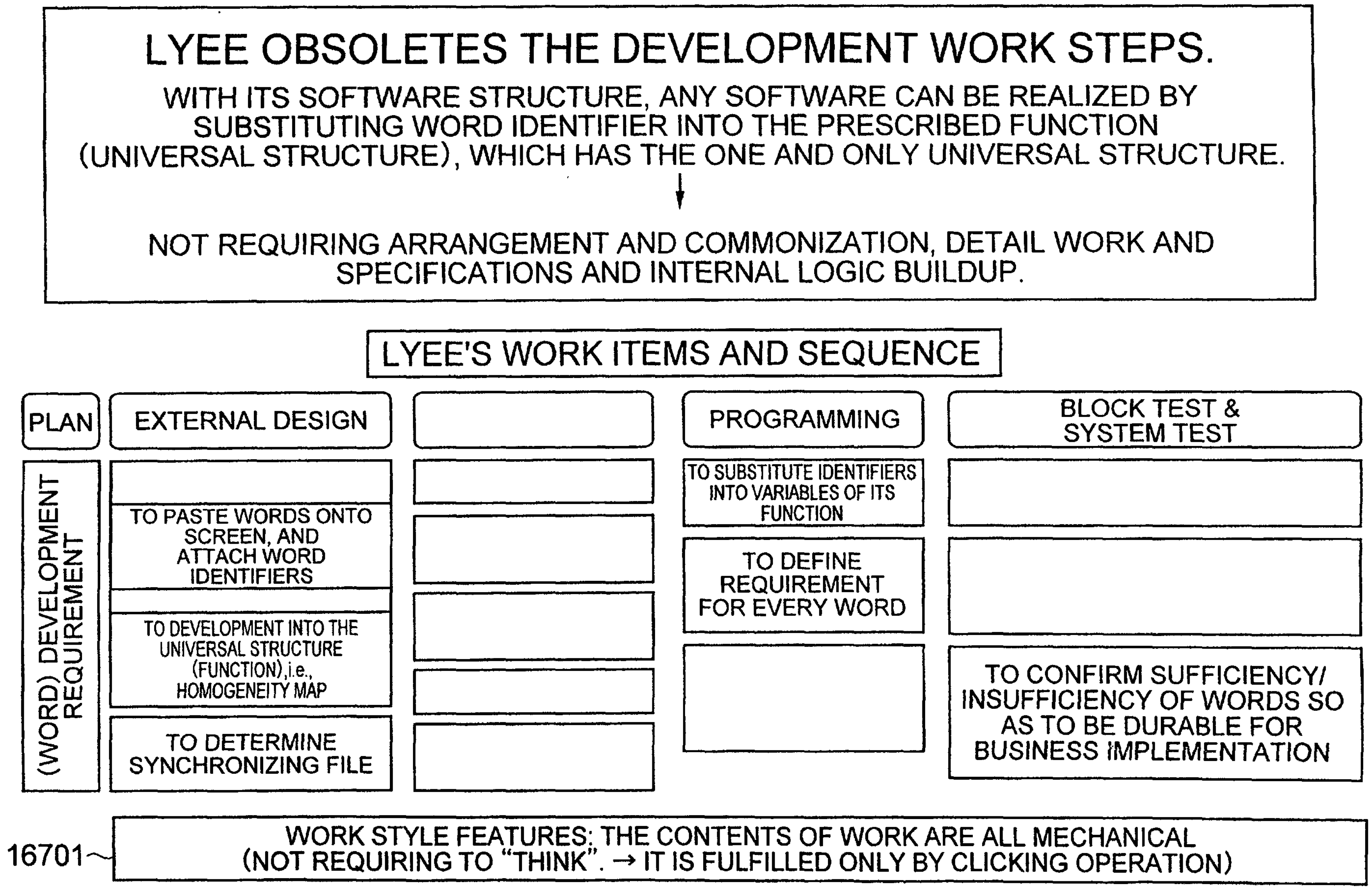

LYEE OBSOLETES THE DEVELOPMENT WORK STEPS.
WITH ITS SOFTWARE STRUCTURE, ANY SOFTWARE CAN BE REALIZED BY SUBSTITUTING WORD IDENTIFIER INTO THE PRESCRIBED FUNCTION (UNIVERSAL STRUCTURE), WHICH HAS THE ONE AND ONLY UNIVERSAL STRUCTURE.
NOT REQUIRING ARRANGEMENT AND COMMONIZATION, DETAIL WORK AND SPECIFICATIONS AND INTERNAL LOGIC BUILDUP.
LYEE'S WORK ITEMS AND SEQUENCE
PLAN
(WORD) DEVELOPMENT REQUIREMENT
EXTERNAL DESIGN
TO PASTE WORDS ONTO SCREEN, AND ATTACH WORD IDENTIFIERS
TO DEVELOPMENT INTO THE UNIVERSAL STRUCTURE (FUNCTION),i.e., HOMOGENEITY MAP
TO DETERMINE SYNCHRONIZING FILE
PROGRAMMING
TO SUBSTITUTE IDENTIFIERS INTO VARIABLES OF ITS FUNCTION
TO DEFINE REQUIREMENT FOR EVERY WORD
BLOCK TEST & SYSTEM TEST
TO CONFIRM SUFFICIENCY/ INSUFFICIENCY OF WORDS SO AS TO BE DURABLE FOR BUSINESS IMPLEMENTATION
16701
WORK STYLE FEATURES: THE CONTENTS OF WORK ARE ALL MECHANICAL (NOT REQUIRING TO "THINK". → IT IS FULFILLED ONLY BY CLICKING OPERATION)

FIG. 168

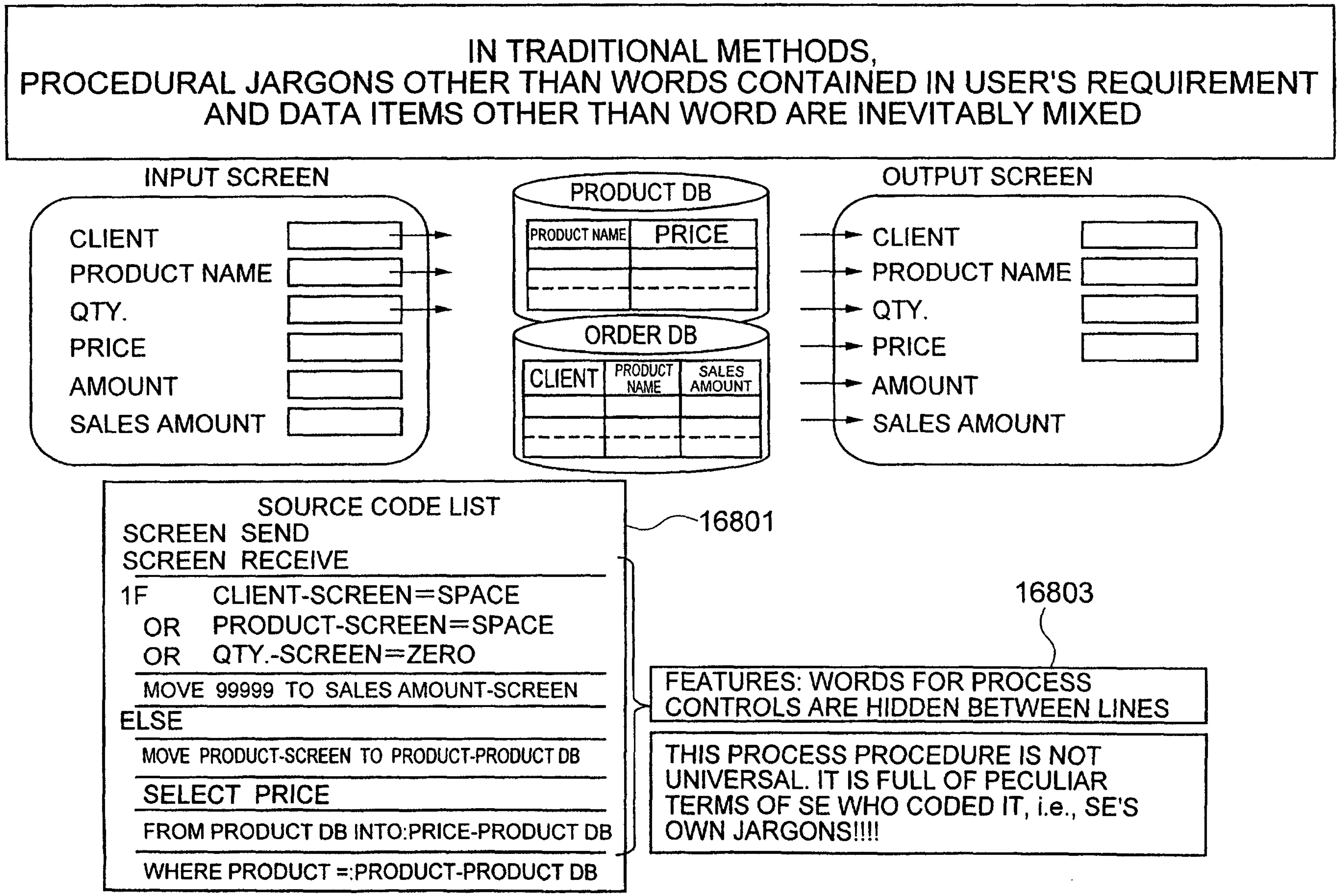
IN TRADITIONAL METHODS,
PROCEDURAL JARGONS OTHER THAN WORDS CONTAINED IN USER'S REQUIREMENT AND DATA ITEMS OTHER THAN WORD ARE INEVITABLY MIXED
INPUT SCREEN
CLIENT
PRODUCT NAME
QTY.
PRICE
AMOUNT
SALES AMOUNT
PRODUCT DB
PRODUCT NAME
PRICE
ORDER DB
CLIENT
PRODUCT NAME
SALES AMOUNT
OUTPUT SCREEN
CLIENT
PRODUCT NAME
QTY.
PRICE
AMOUNT
SALES AMOUNT
SOURCE CODE LIST
SCREEN SEND
SCREEN RECEIVE
1F CLIENT-SCREEN=SPACE
OR PRODUCT-SCREEN=SPACE
OR QTY.-SCREEN=ZERO
MOVE 99999 TO SALES AMOUNT-SCREEN
ELSE
MOVE PRODUCT-SCREEN TO PRODUCT-PRODUCT DB
SELECT PRICE
FROM PRODUCT DB INTO:PRICE-PRODUCT DB
WHERE PRODUCT =:PRODUCT-PRODUCT DB
16801
16803
FEATURES: WORDS FOR PROCESS CONTROLS ARE HIDDEN BETWEEN LINES
THIS PROCESS PROCEDURE IS NOT UNIVERSAL. IT IS FULL OF PECULIAR TERMS OF SE WHO CODED IT, i.e., SE'S OWN JARGONS!!!!

# FIG. 169

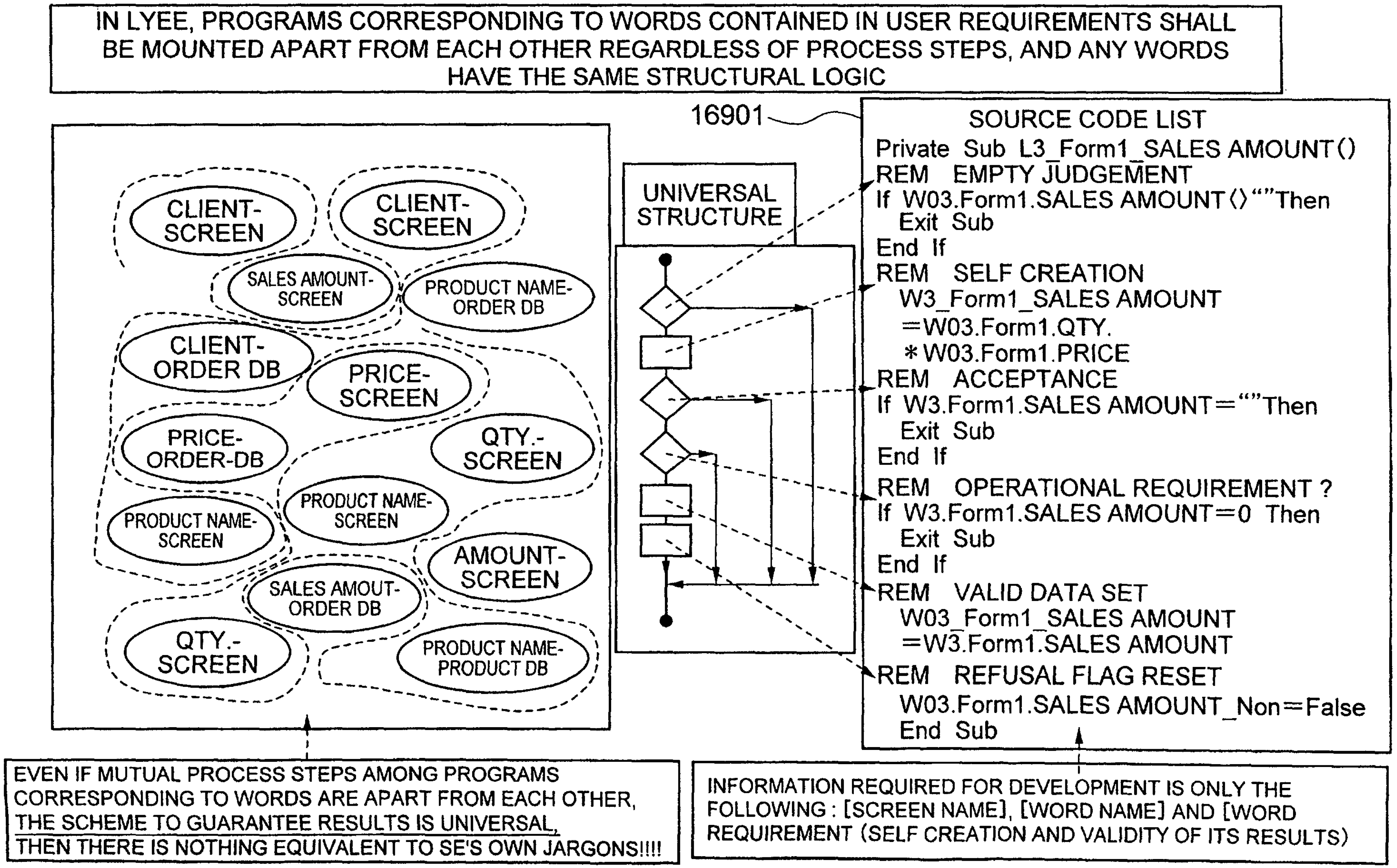
IN LYEE, PROGRAMS CORRESPONDING TO WORDS CONTAINED IN USER REQUIREMENTS SHALL BE MOUNTED APART FROM EACH OTHER REGARDLESS OF PROCESS STEPS, AND ANY WORDS HAVE THE SAME STRUCTURAL LOGIC
CLIENT-SCREEN
CLIENT-SCREEN
SALES AMOUNT-SCREEN
PRODUCT NAME-ORDER DB
CLIENT-ORDER DB
PRICE-SCREEN
PRICE-ORDER-DB
QTY.-SCREEN
PRODUCT NAME-SCREEN
PRODUCT NAME-SCREEN
AMOUNT-SCREEN
SALES AMOUT-ORDER DB
QTY.-SCREEN
PRODUCT NAME-PRODUCT DB
16901
UNIVERSAL STRUCTURE
SOURCE CODE LIST
Private Sub L3_Form1_SALES AMOUNT()
REM EMPTY JUDGEMENT
If W03.Form1.SALES AMOUNT〈〉“”Then
Exit Sub
End If
REM SELF CREATION
W3_Form1_SALES AMOUNT
=W03.Form1.QTY.
＊W03.Form1.PRICE
REM ACCEPTANCE
If W3.Form1.SALES AMOUNT=“”Then
Exit Sub
End If
REM OPERATIONAL REQUIREMENT ?
If W3.Form1.SALES AMOUNT=0 Then
Exit Sub
End If
REM VALID DATA SET
W03_Form1_SALES AMOUNT
=W3.Form1.SALES AMOUNT
REM REFUSAL FLAG RESET
W03.Form1.SALES AMOUNT_Non=False
End Sub
EVEN IF MUTUAL PROCESS STEPS AMONG PROGRAMS CORRESPONDING TO WORDS ARE APART FROM EACH OTHER, THE SCHEME TO GUARANTEE RESULTS IS UNIVERSAL, THEN THERE IS NOTHING EQUIVALENT TO SE'S OWN JARGONS!!!!
INFORMATION REQUIRED FOR DEVELOPMENT IS ONLY THE FOLLOWING : [SCREEN NAME], [WORD NAME] AND [WORD REQUIREMENT (SELF CREATION AND VALIDITY OF ITS RESULTS)

FIG. 170

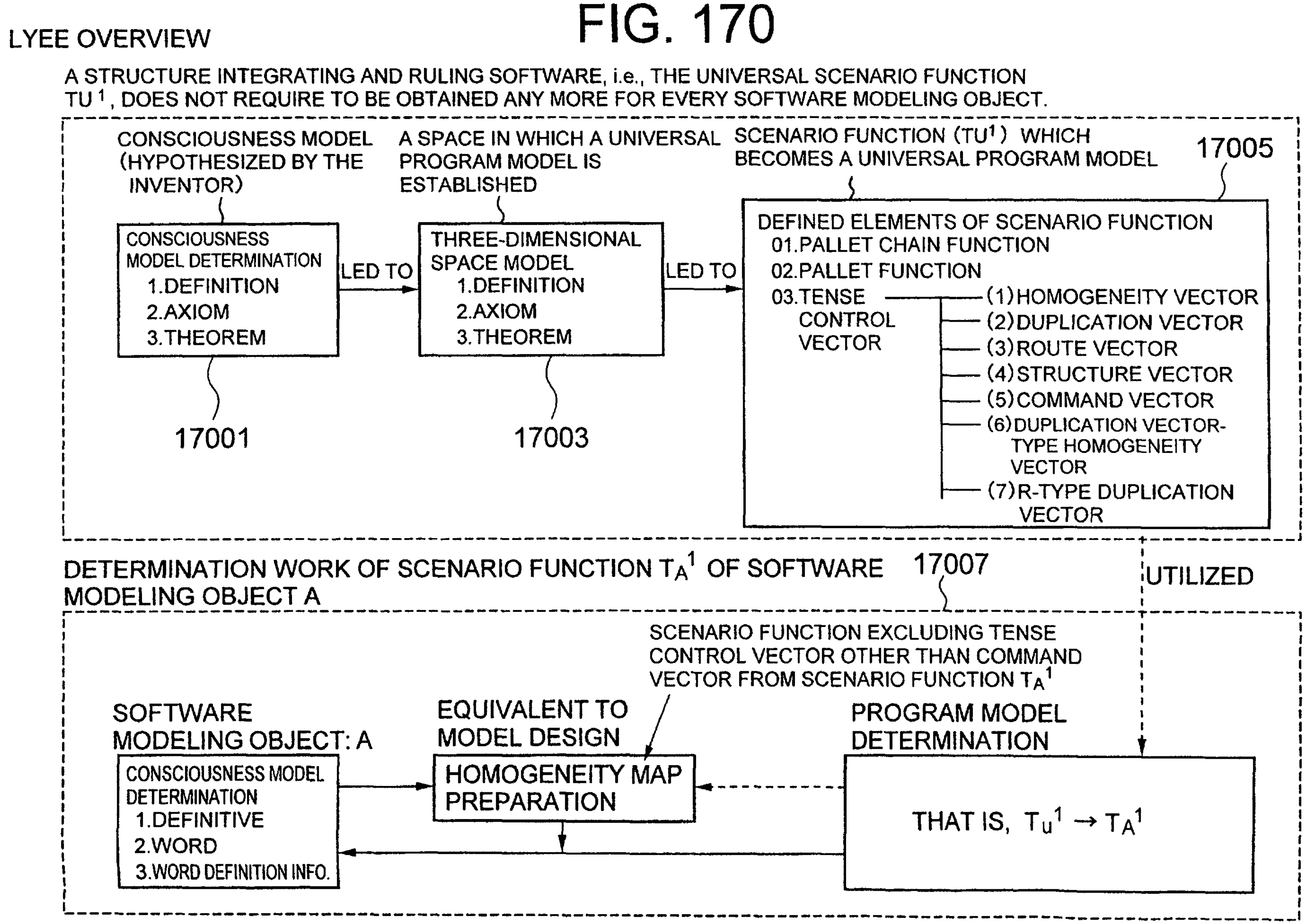
LYEE OVERVIEW
A STRUCTURE INTEGRATING AND RULING SOFTWARE, i.e., THE UNIVERSAL SCENARIO FUNCTION TU 1, DOES NOT REQUIRE TO BE OBTAINED ANY MORE FOR EVERY SOFTWARE MODELING OBJECT.
CONSCIOUSNESS MODEL (HYPOTHESIZED BY THE INVENTOR)
CONSCIOUSNESS MODEL DETERMINATION
1.DEFINITION
2.AXIOM
3.THEOREM
17001
LED TO
A SPACE IN WHICH A UNIVERSAL PROGRAM MODEL IS ESTABLISHED
THREE-DIMENSIONAL SPACE MODEL
1.DEFINITION
2.AXIOM
3.THEOREM
17003
LED TO
SCENARIO FUNCTION (TU1) WHICH BECOMES A UNIVERSAL PROGRAM MODEL
17005
DEFINED ELEMENTS OF SCENARIO FUNCTION
01.PALLET CHAIN FUNCTION
02.PALLET FUNCTION
03.TENSE CONTROL VECTOR
(1)HOMOGENEITY VECTOR
(2)DUPLICATION VECTOR
(3)ROUTE VECTOR
(4)STRUCTURE VECTOR
(5)COMMAND VECTOR
(6)DUPLICATION VECTOR-TYPE HOMOGENEITY VECTOR
(7)R-TYPE DUPLICATION VECTOR
DETERMINATION WORK OF SCENARIO FUNCTION TA1 OF SOFTWARE MODELING OBJECT A
17007
UTILIZED
SCENARIO FUNCTION EXCLUDING TENSE CONTROL VECTOR OTHER THAN COMMAND VECTOR FROM SCENARIO FUNCTION TA1
SOFTWARE MODELING OBJECT: A
CONSCIOUSNESS MODEL DETERMINATION
1.DEFINITIVE
2.WORD
3.WORD DEFINITION INFO.
EQUIVALENT TO MODEL DESIGN
HOMOGENEITY MAP PREPARATION
PROGRAM MODEL DETERMINATION
THAT IS, Tu1 → TA1

FIG. 171

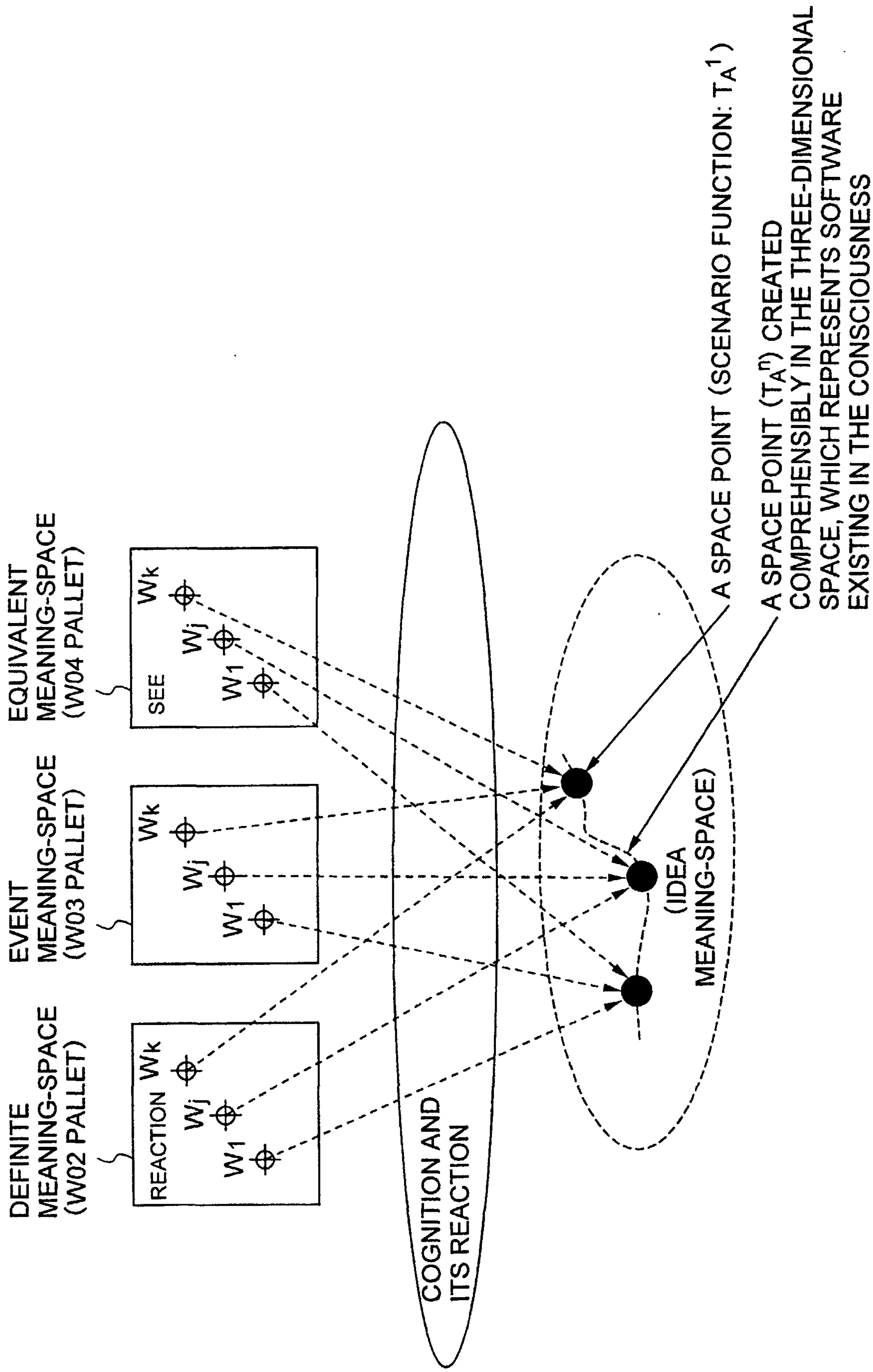
DEFINITE MEANING-SPACE (W02 PALLET)
REACTION
W1
Wj
Wk
EVENT MEANING-SPACE (W03 PALLET)
W1
Wj
Wk
EQUIVALENT MEANING-SPACE (W04 PALLET)
SEE
W1
Wj
Wk
COGNITION AND ITS REACTION
(IDEA MEANING-SPACE)
A SPACE POINT (SCENARIO FUNCTION: $T_A^1$)
A SPACE POINT ($T_A^n$) CREATED COMPREHENSIBLY IN THE THREE-DIMENSIONAL SPACE, WHICH REPRESENTS SOFTWARE EXISTING IN THE CONSCIOUSNESS

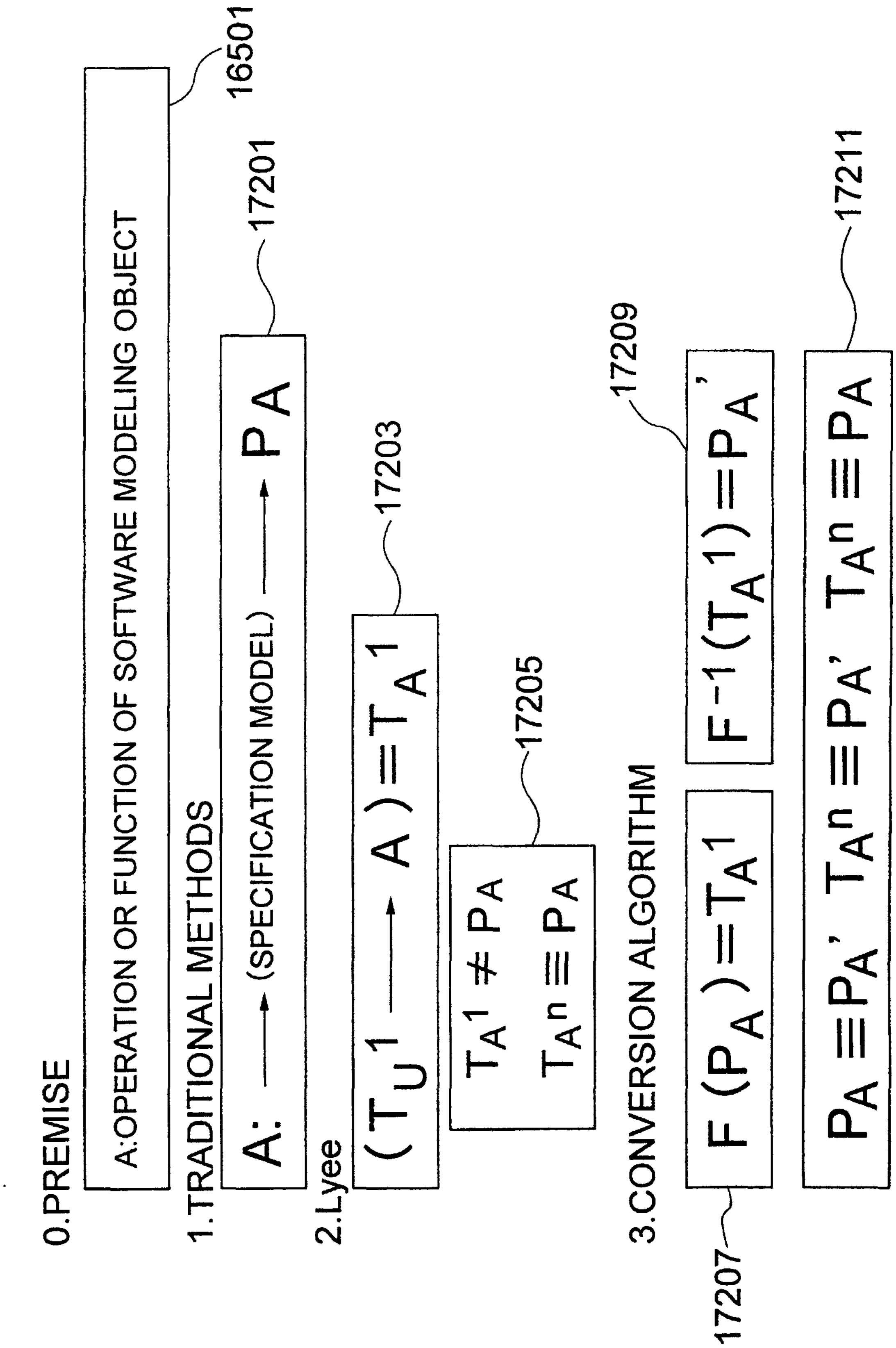
0.PREMISE
A:OPERATION OR FUNCTIOS OF SOFTWARE MODELING OBJECT
16501
1.TRADITIONAL METHODS
A: ⟶ (SPECIFICATION MODEL) ⟶ $P_A$
17201
2.Lyee
$(T_U^1 \longrightarrow A) \equiv T_A^1$
17203
$T_A^1 \neq P_A$
$T_A^n \equiv P_A$
17205
3.CONVERSION ALGORITHM
$F(P_A) \equiv T_A^1$
17207
$F^{-1}(T_A^1) \equiv P_A'$
17209
$P_A \equiv P_A'$ $T_A^n \equiv P_A'$ $T_A^n \equiv P_A$
17211

FIG. 172

FIG. 173

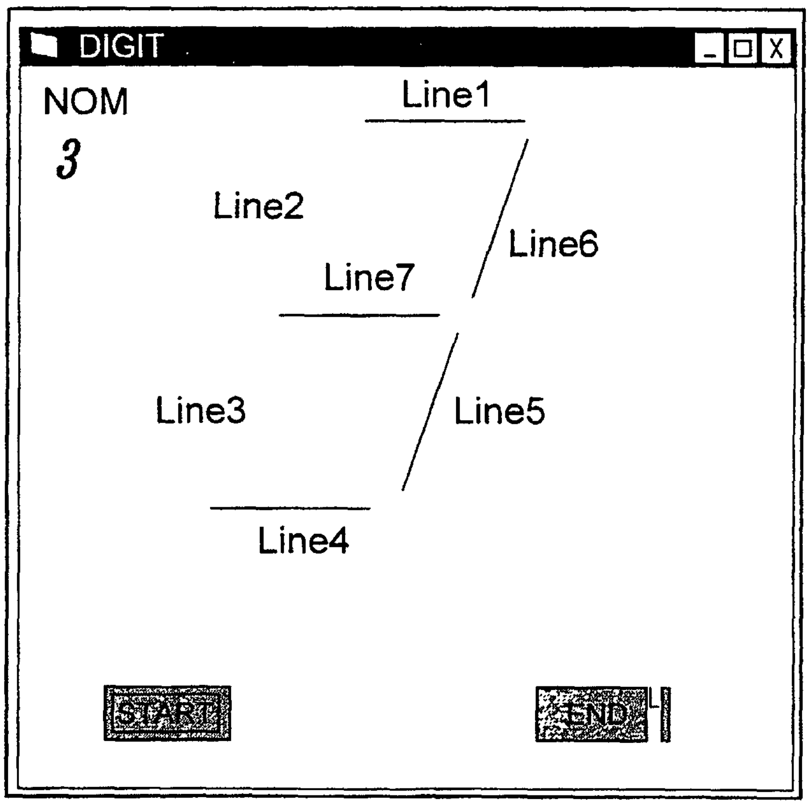
DIGIT
NOM
3
Line1
Line2
Line6
Line7
Line3
Line5
Line4
START
END

## INTERNATIONAL SEARCH REPORT

International application No.
PCT/JP00/04008

A. CLASSIFICATION OF SUBJECT MATTER
Int.Cl$^7$ G06F9/06, 9/44

According to International Patent Classification (IPC) or to both national classification and IPC

B. FIELDS SEARCHED
Minimum documentation searched (classification system followed by classification symbols)
Int.Cl$^7$ G06F9/06, 9/44, 11/20

Documentation searched other than minimum documentation to the extent that such documents are included in the fields searched
Jitsuyo Shinan Koho 1926-1996 Toroku Jitsuyo Shinan Koho 1994-2000
Kokai Jitsuyo Shinan Koho 1971-2000 Jitsuyo Shinan Toroku Koho 1996-2000

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | US, 5564053, A (Junichi Yuki,Fumio Negoro), 08 October, 1996 (08.10.96), Column 10, lines 32 to 65 & JP, 6-332678, A Par. Nos. [0052] to [0053] & IT, 94501005, A & GB, 2280289, A & DE, 4417393, A & FR, 2705477, A | 142 |
| Y | JP, 5-327872, A (NEC Corporation), 10 December, 1993 (10.12.93) (Family: none) | 151,152 |
| Y | "Heiretsu Machine Kaihatsu no Genjou", Joho Shori, Vol. 28, No.1, 15 January, 1987, (15.01.87) (Tokyo) pp.10-18, especially see, page 14 "5.2 Kaihatsu no Mokuteki", page 15, "5.6 Processor Youso no Seinou". | 158,159 |
| X | WO, 97/16784, A1 (Fumio NEGORO), 09 May, 1997 (09.05.97) & EP, 859313, A1 & CN, 1205786, A & NZ, 321670, A | 100,104-106, 108-130, 134-140, 144-149, 153-157,161, 162,169,170 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
12 September, 2000 (12.09.00)

Date of mailing of the international search report
03 October, 2000 (03.10.00)

Name and mailing address of the ISA/
Japanese Patent Office

Facsimile No.

Authorized officer

Telephone No.

Form PCT/ISA/210 (second sheet) (July 1992)

## INTERNATIONAL SEARCH REPORT

International application No.
PCT/JP00/04008

C (Continuation). DOCUMENTS CONSIDERED TO BE RELEVANT

| Category* | Citation of document, with indication, where appropriate, of the relevant passages | Relevant to claim No. |
|---|---|---|
| Y | | 1-10,12-16, 18-34,36-40, 42-58,60-64, 66-82,84-88, 90-99,132,133, 141-143,151, 152,158,159, 166-168,171 |
| A | | 11,17,35,41, 59,65,83,89, 101-103,107, 131,150,160, 163-165 |
| X | WO, 98/19232, A1 (Fumio NEGORO), 07 May, 1998 (07.05.98) & EP, 947916, A1 & CN, 1235682, A | 100,104-106, 108-110, 117-120,123, 124,126-130, 134-140, 144-149, 153-157, 169,170 |
| Y | | 1-10,12-16, 18-34,36-40, 42-58,60-64, 66-82,84-88, 90-99,111-116, 121,122,125, 132,133, 141-143,151, 152,158,159, 161,162, 166-168,171 |
| A | | 11,17,35,41, 59,65,83,89, 101-103,107, 131,150,160, 163-165 |
| Y | JP, 5-88863, A (Kyoraku Co., Ltd.), 09 April, 1993 (09.04.93) (Family: none) | 1-10,12-16, 18-34,36-40, 42-58,60-64, 66-82,84-88, 90-99,171 |
| Y | "Jurai no Software Kaihatsu Hoho wo kutsugaesu LYEE to wa Nanika", Nikkei Computer, Vol.441, 13 April, 1998 (13.04.98)(Tokyo), Nikkei BP K.K., pp.64-66 | 1-10,12-16, 18-34,36-40, 42-58,60-64, 66-82,84-88, 90-99,132,133, 141-143,166, 171 |
| Y | "LYEE ni yotte Gekiteki ni Henka suru Kaihatsu Koutei", Nikkei Computer, No.444, 25 May, 1998 (25.05.98)(Tokyo) Nikkei BP K.K., pp.112-114, especially, see Fig.2 | 1-10,12-16, 18-34,36-40, 42-58,60-64, 66-82,84-88, |

Form PCT/ISA/210 (continuation of second sheet) (July 1992)

**INTERNATIONAL SEARCH REPORT**

International application No.
PCT/JP00/04008

C (Continuation). DOCUMENTS CONSIDERED TO BE RELEVANT

| Category* | Citation of document, with indication, where appropriate, of the relevant passages | Relevant to claim No. |
|---|---|---|
| | | 90-99,132,133, 141-143,166, 171 |
| Y | "LYEE ni yoru Kaihatsu no Jissai to Riyou no Kokorogamae", Nikkei Computer, Vol.446, 22 June, 1998 (22.06.98) (Tokyo), Nikkei BP K.K., pp.134-137, especially, see page 137 | 1-10,12-16, 18-34,36-40, 42-58,60-64, 66-82,84-88, 90-99,132,133, 141-143,166, 171 |
| A | "Soft Kaihatsu de Gekitekina Nouritsusei wo Soushutsu suru Shikouhou LYEE Riron no Ittan wo Kaiji suru", Nikkei BP K.K., pp.128-131, Nikkei Computer, Vol.448, 20 July, 1998 (20.07.98) (Tokyo) | 1-171 |
| PX | WO, 99/49387, A1 (The Institute of Computer Based Software Methodology and Technology), 30 September, 1999 (30.09.99) (Family: none) | 1-10,12,13,20, 21,23-34,36, 37,44,45, 47-58,60,61, 68,69,71-82, 84,85,92,93, 95-99,132,133, 166-168 |

Form PCT/ISA/210 (continuation of second sheet) (July 1992)

## INTERNATIONAL SEARCH REPORT

International application No.
PCT/JP00/04008

**Box I Observations where certain claims were found unsearchable (Continuation of item 1 of first sheet)**

This international search report has not been established in respect of certain claims under Article 17(2)(a) for the following reasons:

1. ☒ Claims Nos.: 172-174
because they relate to subject matter not required to be searched by this Authority, namely:

The "program product" stated in claim 172 and the "paradigm-based program" stated in claim 174 are programs. The "transmitted wave" stated in claim 173 has a feature only in the information transmitted and the invention of claim 173 relates to mere presentations of information.

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 2 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.
☐ No protest accompanied the payment of additional search fees.

Form PCT/ISA/210 (continuation of first sheet (1)) (July 1992)